(19) Europäisches Patentamt
European Patent Office
Office européen des brevets

(11) **EP 4 531 356 B1**

(12) **EUROPEAN PATENT SPECIFICATION**

(45) Date of publication and mention
of the grant of the patent:
**03.06.2026  Bulletin 2026/23**

(51) International Patent Classification (IPC):
**H04B 10/54** (2013.01)   **H04L 27/26** (2006.01)
**H04B 10/532** (2013.01)

(21) Application number: **24213634.9**

(22) Date of filing: **19.04.2022**

(52) Cooperative Patent Classification (CPC):
**H04L 27/2613; H04B 10/532; H04B 10/541;
H04L 27/2602;** Y02D 30/70

(54) **TRANSMISSION METHOD AND RECEPTION METHOD FOR OPTICAL COMMUNICATION, AND
CORRESPONDING DEVICE**

SENDEVERFAHREN UND EMPFANGSVERFAHREN FÜR OPTISCHE KOMMUNIKATION UND
ENTSPRECHENDE VORRICHTUNG

PROCÉDÉ DE TRANSMISSION ET PROCÉDÉ DE RÉCEPTION POUR COMMUNICATION
OPTIQUE, ET DISPOSITIF CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2021   CN 202110424596
01.12.2021   CN 202111456537
27.01.2022   CN 202210102040**

(43) Date of publication of application:
**02.04.2025   Bulletin 2025/14**

(60) Divisional application:
**26171555.1**

(62) Document number(s) of the earlier application(s) in
accordance with Art. 76 EPC:
**22791040.3 / 4 318 977**

(73) Proprietor: **Huawei Technologies Co., Ltd.
Shenzhen, Guangdong 518129 (CN)**

(72) Inventors:
• **HUANG, Kechao
Shenzhen, Guangdong, 518129 (CN)**
• **LEUNG, Wai Kong Raymond
Shenzhen, Guangdong, 518129 (CN)**

(74) Representative: **MERH-IP Matias Erny Reichl
Hoffmann
Patentanwälte PartG mbB
Paul-Heyse-Straße 29
80336 München (DE)**

(56) References cited:
**US-A1- 2019 305 854**

• **PHYSICAL AND LINK LAYER (PLL) WORKING
GROUP: "Implementation Agreement 400ZR", 10
March 2020 (2020-03-10), pages 1 - 100,
XP093184412, Retrieved from the Internet
<URL:https://www.oiforum.com/wp-content/
uploads/OIF-400ZR-01.0_reduced2.pdf>
[retrieved on 20200310]**
• **PENG LINNING ET AL: "Hybrid PN-ZP-DMT
Scheme for Spectrum-Efficient Optical
Communications and Its Application to SI-POF",
JOURNAL OF LIGHTWAVE TECHNOLOGY, IEEE,
USA, vol. 32, no. 18, 15 September 2014
(2014-09-15), pages 3149 - 3160, XP011555771,
ISSN: 0733-8724, [retrieved on 20140808], DOI:
10.1109/JLT.2014.2338133**

# EP 4 531 356 B1

**Description**

## TECHNICAL FIELD

This application relates to the field of optical communication, and in particular, to a transmission method and a reception method for optical communication, and a corresponding device.

## BACKGROUND

Driven by the continuous development of 5G, cloud computing, big data, artificial intelligence, and other technologies, high-speed optical transport networks are developing toward high capacity, packet-based, and intelligence. A coherent optical communication system uses the amplitude, phase, polarization, and frequency of light waves to carry information. To combat optical signal distortion caused by dispersion, polarization-dependent impairment, noise, non-linear effect, and other factors in a transmission process and maintain long-distance transmission, a coherent optical communication system usually adds some designed fixed symbol sequences to a transmission symbol sequence, so as to help a receiver end restore transmitted symbols.

An existing transmission symbol sequence is mainly applied to a 400-Gbps scenario, and cannot adapt to a future scenario of over 400 Gbps (including 600 Gbps, 800 Gbps, and the like). In addition, there is a poor cross-correlation between transmission symbol sequences in different polarization directions. These are problems that need to be urgently resolved in the future.

US 2019/305854 A1 relates to a communication network including a coherent optics transmitter, a coherent optics receiver, an optical transport medium operably coupling the coherent optics transmitter to the coherent optics receiver, and a coherent optics interface.

Physical And Link Layer (pll) Working Group: "Implementation Agreement 400ZR" relates to a Digital Coherent 400ZR interface for two applications.

PENG LINNING ET AL: "Hybrid PN-ZP-DMT Scheme for Spectrum-Efficient Optical Communication and Its Application to SI-POF", JOURNAL OF LIGHTWAVE TECHNOLOGY, IEEE, USA, vol. 32, no. 18, 15 September 2014, relates to a discrete multi-tone (DMT) scheme for optical communication.

## SUMMARY

This application provides a transmission method for optical communication, to resolve the problems of an inability of the conventional technology to be applied to a scenario of over 400 Gbps, and a poor cross-correlation between symbol sequences in different polarization directions.

The present invention is defined by the independent claims. Embodiments labelled as inventive embodiments in the following, which are not covered by the scope of protection defined by the independent claims, are to be understood as examples helpful for understanding the invention, but not as embodiments of the invention. According to a first aspect, a transmission method for optical communication is provided. The method includes: generating a super-frame including a plurality of sub-frames, where the sub-frame includes training symbols and pilot symbols; in one polarization direction, a sum of quantities of training symbols and pilot symbols included in the sub-frame is not less than 5, and there is one symbol that is both a training symbol and a pilot symbol; and each of the training symbols and the pilot symbols is one of $-A-Aj$, $-A+Aj$, $A-Aj$, or $A+Aj$, A being a real number; in the training symbols and the pilot symbols included in each sub-frame, quantities of $-A-Aj$, $-A+Aj$, $A-Aj$, and $A+Aj$ in one polarization direction are respectively $\lfloor (N_{TS}+N_{PS}-1)/4 \rfloor$, $(N_{TS}+N_{PS}-1)/2-\lfloor (N_{TS}+N_{PS}-1)/4 \rfloor$, $(N_{TS}+N_{PS}-1)/2-\lfloor (N_{TS}+N_{PS}-1)/4 \rfloor$, and $\lfloor (N_{TS}+N_{PS}-1)/4 \rfloor$, and quantities thereof in the other polarization direction are respectively $(N_{TS}+N_{PS}-1)/2-\lfloor (N_{TS}+N_{PS}-1)/4 \rfloor$, $\lfloor (N_{TS}+N_{PS}-1)/4 \rfloor$, $\lfloor (N_{TS}+N_{PS}-1)/4 \rfloor$, and $(N_{TS}+N_{PS}-1)/2-\lfloor (N_{TS}+N_{PS}-1)/4 \rfloor$, where $N_{TS}$ is a quantity of the training symbols in each sub-frame in one polarization direction, $N_{PS}$ is a quantity of the pilot symbols in each sub-frame in one polarization direction, $N_{TS}+N_{PS}$ is an odd number, and the two polarization directions are orthogonal to each other; and transmitting the super-frame.

According to a second aspect, a reception method for optical communication is provided. The method includes: receiving a super-frame including a plurality of sub-frames, where the sub-frame includes training symbols and pilot symbols; in one polarization direction, a sum of quantities of training symbols and pilot symbols included in the sub-frame is not less than 5, and there is one symbol that is both a training symbol and a pilot symbol; and each of the training symbols and the pilot symbols is one of $-A-Aj$, $-A+Aj$, $A-Aj$, or $A+Aj$, A being a real number; in the training symbols and the pilot symbols included in each sub-frame, quantities of $-A-Aj$, $-A+Aj$, $A-Aj$, and $A+Aj$ in one polarization direction are respectively $\lfloor (N_{TS}+N_{PS}-1)/4 \rfloor$, $(N_{TS}+N_{PS}-1)/2-\lfloor (N_{TS}+N_{PS}-1)/4 \rfloor$, $(N_{TS}+N_{PS}-1)/2-\lfloor (N_{TS}+N_{PS}-1)/4 \rfloor$, and $\lfloor (N_{TS}+N_{PS}-1)/4 \rfloor$, and

quantities thereof in the other polarization direction are respectively $(N_{TS}+N_{PS}-1)/2-\lfloor(N_{TS}+N_{PS}-1)/4\rfloor, \lfloor(N_{TS}+N_{PS}-1)/4\rfloor, \lfloor(N_{TS}+N_{PS}-1)/4\rfloor$, and $(N_{TS}+N_{PS}-1)/2-\lfloor(N_{TS}+N_{PS}-1)/4\rfloor$, where $N_{TS}$ is a quantity of the training symbols in each sub-frame in one polarization direction, $N_{PS}$ is a quantity of the pilot symbols in each sub-frame in one polarization direction, $N_{TS}+N_{PS}$ is an odd number, and the two polarization directions are orthogonal to each other; and decoding the received super-frame.

In embodiments of this application, in each polarization direction, one sub-frame includes a total of $N_{TS}+N_{PS}-1$ training symbols and pilot symbols. For these symbols, a difference between quantities of -A-Aj, -A+Aj, A-Aj, and A+Aj is not greater than 1. In addition, in one sub-frame, quantities of the four complex numbers representing the training symbols and the pilot symbols are the same in the two polarization directions, and are all $(N_{TS}+N_{PS}-1)/2$, thereby effectively ensuring a balance between symbol quantities. In addition, it is also possible that a sequence consisting of the training symbols and a sequence consisting of the pilot symbols achieve direct current (DC) balance, which facilitates quality of a signal restored at a receiver end.

With reference to the first aspect or the second aspect, in a first possible implementation, in one sub-frame, a sequence consisting of training symbols in one polarization direction is different from a sequence consisting of training symbols in the other polarization direction, and a sequence consisting of pilot symbols in one polarization direction is different from a sequence consisting of pilot symbols in the other polarization direction. This avoids the problem that the receiver end cannot distinguish the two polarization directions in actual transmission.

With reference to the foregoing implementations, in a second possible implementation, the training symbols are consecutively arranged in the sub-frame, and in either of the polarization directions, in the training symbols included in the sub-frame, a quantity of consecutive same real part elements is not greater than 5, and a quantity of consecutive same imaginary part elements is not greater than 5. Further, in either of the polarization directions, a quantity of consecutive same training symbols in one sub-frame does not exceed 4. A training sequence obtained in this condition facilitates clock recovery, thereby helping improve quality of a signal restored at the receiver end.

With reference to the foregoing implementations, in a third possible implementation of the first aspect, the plurality of sub-frames further include a first sub-frame, the first sub-frame includes consecutively arranged frame alignment word symbols, and each frame alignment word symbol is one of -A-Aj, -A+Aj, A-Aj, and A+Aj; and in either of the polarization directions, in the frame alignment word symbols included in the sub-frame, a quantity of consecutive same real part elements is not greater than 5. and a quantity of consecutive same imaginary part elements is not greater than 5. Further, in either of the polarization directions, a quantity of consecutive same frame alignment word symbols in the first sub-frame does not exceed 4. A frame alignment word sequence obtained in this condition also facilitates clock recovery, thereby helping improve quality of a signal restored at the receiver end.

With reference to the third possible implementation, in a fourth possible implementation, in the frame alignment word symbols included in the first sub-frame, quantities of -A-Aj, -A+Aj, A-Aj, and A+Aj in one polarization direction are respectively $\lceil N_{FAW}/4\rceil, N_{FAW}/2-\lceil N_{FAW}/4\rceil, N_{FAW}/2-\lceil N_{FAW}/4\rceil$, and $\lceil N_{FAW}/4\rceil$, and quantities thereof in the other polarization direction are respectively $N_{FAW}/2-\lceil N_{FAW}/4\rceil, \lceil N_{FAW}/4\rceil, \lceil N_{FAW}/4\rceil$, and $N_{FAW}/2-\lceil N_{FAW}/4\rceil$, where $N_{FAW}$ is a quantity of the frame alignment word symbols in the first sub-frame in one polarization direction, and $N_{FAW}$ is an even number. This embodiment ensures that the plurality of frame alignment word symbols meet direct current balance, and a difference between quantities of the four available symbols -A-Aj, -A+Aj, A-Aj, and A+Aj is not greater than 1, which facilitates quality of a signal restored at the receiver end.

With reference to the foregoing implementations, in a fifth possible implementation, $N_{TS}$ is an even number, and in the training symbols included in each sub-frame, quantities of -A-Aj, -A+Aj, A-Aj, and A+Aj in one polarization direction are respectively $\lceil N_{TS}/4\rceil, N_{TS}/2-\lceil N_{TS}/4\rceil, N_{TS}/2-\lceil N_{TS}/4\rceil$, and $\lceil N_{TS}/4\rceil$, and quantities thereof in the other polarization direction are respectively $N_{TS}/2-\lceil N_{TS}/4\rceil, \lceil N_{TS}/4\rceil, \lceil N_{TS}/4\rceil$, and $N_{TS}/2-\lceil N_{TS}/4\rceil$.

With reference to any one of the possible implementations of the first aspect, the second aspect, or the first to the fourth possible implementations, in a sixth possible implementation, $N_{TS}$ is an odd number, and in the training symbols included in each sub-frame, except the training symbol that is also used as a pilot symbol, quantities of -A-Aj, -A+Aj, A-Aj, and A+Aj in one polarization direction are respectively $\lfloor(N_{TS}-1)/4\rfloor, (N_{TS}-1)/2-\lfloor(N_{TS}-1)/4\rfloor, (N_{TS}-1)/2-\lfloor(N_{TS}-1)/4\rfloor$, and $\lfloor(N_{TS}-1)/4\rfloor$, and quantities thereof in the other polarization direction are respectively $(N_{TS}-1)/2-\lfloor(N_{TS}-1)/4\rfloor, \lfloor(N_{TS}-1)/4\rfloor, \lfloor(N_{TS}-1)/4\rfloor$, and $(N_{TS}-1)/2-\lfloor(N_{TS}-1)/4\rfloor$.

The foregoing two embodiments provide the quantities of several possible symbols of the training sequence in different polarization directions in two different cases, and the quantities of training symbols -A-Aj, - A+Aj, A-Aj, and A+Aj included in one sub-frame are close to each other. In addition, in each polarization direction, except the training symbol that is also used as a pilot symbol (if there are an odd number of training symbols), a sum of real parts of complex numbers corresponding to the other training symbols is 0, and a sum of imaginary parts thereof is also 0, so that direct current balance can be achieved, which facilitates quality of a signal restored at the receiver end.

With reference to any one of the possible implementations of the first aspect, the second aspect, or the first to the fourth possible implementations, in a seventh possible implementation, $N_{PS}$ is an even number, and in the pilot symbols included in each sub-frame, quantities of -A-Aj, -A+Aj, A-Aj, and A+Aj in one polarization direction are respectively $\lfloor N_{PS}/4 \rfloor$, $N_{PS}/2-\lfloor N_{PS}/4 \rfloor$, $N_{PS}/2-\lfloor N_{PS}/4 \rfloor$, and $\lfloor N_{PS}/4 \rfloor$, and quantities thereof in the other polarization direction are respectively $N_{PS}/2-\lfloor N_{PS}/4 \rfloor$, $\lfloor N_{PS}/4 \rfloor$, $\lfloor N_{PS}/4 \rfloor$, and $N_{PS}/2-\lfloor N_{PS}/4 \rfloor$.

With reference to any one of the possible implementations of the first aspect, the second aspect, or the first to the fourth possible implementations, in an eighth possible implementation, $N_{PS}$ is an odd number, and in the pilot symbols included in each sub-frame, except the pilot symbol that is also used as a training symbol, quantities of -A-Aj, -A+Aj, A-Aj, and A+Aj in one polarization direction are respectively $\lfloor (N_{PS}-1)/4 \rfloor$, $(N_{PS}-1)/2-\lfloor (N_{PS}-1)/4 \rfloor$, $(N_{PS}-1)/2-\lfloor (N_{PS}-1)/4 \rfloor$, and $\lfloor (N_{PS}-1)/4 \rfloor$, and quantities thereof in the other polarization direction are respectively $(N_{PS}-1)/2-\lfloor (N_{PS}-1)/4 \rfloor$, $\lfloor (N_{PS}-1)/4 \rfloor$, $\lfloor (N_{PS}-1)/4 \rfloor$, and $(N_{PS}-1)/2-\lfloor (N_{PS}-1)/4 \rfloor$.

With reference to any one of the possible implementations of the first aspect, the second aspect, or the first to the fourth possible implementations, in a ninth possible implementation, in each sub-frame, a remainder of a quantity of pilot symbols in one polarization direction divided by 4 is 0, and in the pilot symbols included in each sub-frame, quantities of -A-Aj, -A+Aj, A-Aj, and A+Aj in one polarization direction are respectively $N_{PS}/4+1$, $N_{PS}/4-1$, $N_{PS}/4-1$, and $N_{PS}/4+1$, and quantities thereof in the other polarization direction are respectively $N_{PS}/4-1$, $N_{PS}/4+1$, $N_{PS}/4+1$, and $N_{PS}/4-1$; or quantities thereof in both polarization directions are $N_{PS}/4$.

With reference to any one of the possible implementations of the first aspect, the second aspect, or the first to the fourth possible implementations, in a tenth possible implementation, in each sub-frame, a remainder of a quantity of pilot symbols in one polarization direction divided by 4 is 2, and in the pilot symbols included in each sub-frame, quantities of -A-Aj, -A+Aj, A-Aj, and A+Aj in one polarization direction are respectively $(N_{PS}-2)/4$, $(N_{PS}-2)/4+1$, $(N_{PS}-2)/4+1$, and $(N_{PS}-2)/4$, and quantities thereof in the other polarization direction are respectively $(N_{PS}-2)/4+1$, $(N_{PS}-2)/4$, $(N_{PS}-2)/4$, and $(N_{PS}-2)/4+1$.

With reference to any one of the possible implementations of the first aspect, the second aspect, or the first to the fourth possible implementations, in an eleventh possible implementation, in each sub-frame, a remainder of a quantity of pilot symbols in one polarization direction divided by 4 is 1, and in the pilot symbols included in each sub-frame, except the pilot symbol that is also used as a training symbol, quantities of -A-Aj, -A+Aj, A-Aj, and A+Aj in one polarization direction are respectively $(N_{PS}-1)/4+1$, $(N_{PS}-1)/4-1$, $(N_{PS}-1)/4-1$, and $(N_{PS}-1)/4+1$, and quantities thereof in the other polarization direction are respectively $(N_{PS}-1)/4-1$, $(N_{PS}-1)/4+1$, $(N_{PS}-1)/4+1$, and $(N_{PS}-1)/4-1$; or quantities thereof in both polarization directions are $(N_{PS}-1)/4$.

With reference to any one of the possible implementations of the first aspect, the second aspect, or the first to the fourth possible implementations, in a twelfth possible implementation, in each sub-frame, a remainder of a quantity of pilot symbols in one polarization direction divided by 4 is 3, and in the pilot symbols included in each sub-frame, except the pilot symbol that is also used as a training symbol, quantities of -A-Aj, -A+Aj, A-Aj, and A+Aj in one polarization direction are respectively $(N_{PS}-3)/4$, $(N_{PS}-3)/4+1$, $(N_{PS}-3)/4+1$, and $(N_{PS}-3)/4$, and quantities thereof in the other polarization direction are respectively $(N_{PS}-3)/4+1$, $(N_{PS}-3)/4$, $(N_{PS}-3)/4$, and $(N_{PS}-3)/4+1$.

The seventh to the twelfth implementations provide the quantities of several possible symbols of the pilot sequence in different polarization directions in several different cases, and the quantities of pilot symbols -A-Aj, -A+Aj, A-Aj, and A+Aj included in one sub-frame are close to each other, thereby effectively ensuring balance between the training symbols. In addition, in each polarization direction, except the pilot symbol that is also used as a training symbol (if there are an odd number of pilot symbols), a sum of real parts of the complex numbers corresponding to the other pilot symbols is 0, and a sum of imaginary parts thereof is also 0, so that direct current balance can be achieved, which facilitates quality of a signal restored at the receiver end.

With reference to the foregoing implementations, in a thirteenth possible implementation, a modulation format of the symbols in the super-frame is 16QAM, and a value of A is 1 or 3. Alternatively, symbols in a constellation diagram may be compressed, and the value of A is also compressed accordingly. Taking 16QAM as an example, power normalization is performed on the 16 symbols in the 16QAM constellation diagram, in which case the value is changed to $\{\pm\frac{1}{\sqrt{10}}\pm\frac{1}{\sqrt{10}}j, \pm\frac{1}{\sqrt{10}}\pm\frac{3}{\sqrt{10}}j, \pm\frac{3}{\sqrt{10}}\pm\frac{1}{\sqrt{10}}j, \pm\frac{3}{\sqrt{10}}\pm\frac{3}{\sqrt{10}}j\}$, and the value of A is $\frac{1}{\sqrt{10}}$ or $\frac{3}{\sqrt{10}}$. It should be understood that, when the pilot symbols and the training symbols, -A-Aj, -A+Aj, A-Aj, and A+Aj, are the outermost four symbols in the constellation diagram, the training symbols and the pilot symbols have a relatively high sensitivity (sensitivity), but have a relatively large peak-to-average power (peak to average power) ratio; and when the values of the pilot symbols and the training symbols, -A-Aj, -A+Aj, A-Aj, and A+Aj, are the innermost four symbols in the constellation diagram, the training symbols and the pilot symbols have relatively small noise (noise), but have a relatively low sensitivity (sensitivity).

It should be noted that, in some actual application scenarios, the pilot symbols and the training symbols, -A-Aj, -A+Aj, A-Aj, and A+Aj, may not be symbols in the constellation diagram of the used modulation format, and may be four symbols in a middle area between the outermost four symbols and the innermost four symbols in the constellation diagram. In this case, the training symbols and the pilot symbols have fair noise and sensitivity, but have a relatively low peak-to-average power ratio. Taking 16QAM as an example, values of the 16 symbols in the 16QAM constellation diagram are $\{\pm 1 \pm 1j, \pm 1 \pm 3j, \pm 3 \pm 1j, \pm 3 \pm 3j\}$, and a value of the real number A meets $1 \le A \le 3$. More specifically, the outermost four symbols in the constellation diagram are 3 + 3j, 3 - 3j, -3 + 3j, and -3 - 3j, and the innermost four symbols in the constellation diagram are 1 + 1j, 1 - 1j, -1 + 1j, and -1 - 1j. The values of the pilot symbols and the training symbols. -A-Aj, -A+Aj, A-Aj, and A+Aj, may be four symbols in the middle area between the outermost four symbols and the innermost four symbols in the 16QAM constellation diagram. A specific value of the real number A may be selected according to an actual application scenario, so that the peak-to-average power ratio, noise, and sensitivity of the training symbols and the pilot symbols have a good compromise. For example, the real number $A = \sqrt{5}$, and the values of the pilot symbols and the training symbols are $\{-\sqrt{5} - \sqrt{5}j, -\sqrt{5} + \sqrt{5}j, \sqrt{5} - \sqrt{5}j, \sqrt{5} + \sqrt{5}j\}$. In addition, when the 16 symbols in the 16QAM constellation diagram are subjected to power normalization and have values of $\{\pm \frac{1}{\sqrt{10}} \pm \frac{1}{\sqrt{10}}j, \pm \frac{1}{\sqrt{10}} \pm \frac{3}{\sqrt{10}}j, \pm \frac{3}{\sqrt{10}} \pm \frac{1}{\sqrt{10}}j, \pm \frac{3}{\sqrt{10}} \pm \frac{3}{\sqrt{10}}j\}$, the value of the real number A meets $\frac{1}{\sqrt{10}} \le A \le \frac{3}{\sqrt{10}}$. For example, the real number $A = \frac{\sqrt{2}}{2}$, and the values of the pilot symbols and the training symbols are $\{-\frac{\sqrt{2}}{2} - \frac{\sqrt{2}}{2}j, -\frac{\sqrt{2}}{2} + \frac{\sqrt{2}}{2}j, \frac{\sqrt{2}}{2} - \frac{\sqrt{2}}{2}j, \frac{\sqrt{2}}{2} + \frac{\sqrt{2}}{2}j\}$.

With reference to the foregoing implementations, in a fourteenth possible implementation, in each sub-frame, a symbol at a fixed position in every 64 symbols is the pilot symbol. For example, the 1st symbol in every 64 symbols is the pilot symbol.

With reference to any one of the possible implementations of the first aspect, the second aspect, or the first to the thirteenth possible implementations, in a fifteenth possible implementation, in each sub-frame, a symbol at a fixed position in every 48 symbols is the pilot symbol. For example, the 1st symbol in every 48 symbols is the pilot symbol.

It should be understood that the foregoing implementations may all be combined with the first aspect or the second aspect, which is not limited in this application.

According to a third aspect, a transmitting device for optical communication is provided. The transmitting device includes a processor and a memory. The memory is configured to store instructions, and the processor is configured to execute the instructions, to cause the transmitting device to perform the method in any one of the first aspect or the possible implementations of the first aspect.

According to a fourth aspect, a receiving device for optical communication is provided. The transmitting device includes a processor and a memory. The memory is configured to store instructions, and the processor is configured to execute the instructions, to cause the receiving device to perform the method in any one of the second aspect or the possible implementations of the second aspect.

According to a fifth aspect, a system for optical communication is provided. The system includes the transmitting device according to the third aspect and the receiving device according to the fourth aspect.

It should be understood that the processor may be a central processing unit (Central Processing Unit, "CPU" for short), or may be another general-purpose processor, a digital signal processor (DSP), an application-specific integrated circuit (ASIC), a field-programmable gate array (FPGA) or another programmable logic device, a discrete gate or a transistor logic device, a discrete hardware component, or the like. The general-purpose processor may be a microprocessor, or the processor may be any conventional processor or the like, which is not limited in embodiments of this application.

According to a sixth aspect, a computer-readable storage medium is provided. The computer-readable storage medium stores instructions that, when executed on a terminal device, cause the terminal device to perform the method in any one of the first aspect or the possible implementations of the first aspect, or cause the terminal device to perform the method in any one of the second aspect or the possible implementations of the second aspect.

According to a seventh aspect, a computer program product including instructions is provided. The computer program product, when run on a terminal device, causes the terminal device to perform the method according to any one of the first aspect or the possible implementations of the first aspect, or causes the terminal device to perform the method according to any one of the second aspect or the possible implementations of the second aspect. It should be understood that the terminal device may be a chip, a processor, or the like, which is not limited in this application.

According to an eighth aspect, a transmission method for optical communication is provided. The method includes: generating a super-frame including a plurality of sub-frames, where the sub-frame includes training symbols and pilot symbols; in one polarization direction, there is one symbol that is both a training symbol and a pilot symbol, and each of the training symbols and the pilot symbols is one of -A-Aj, -A+Aj, A-Aj, and A+Aj, A being a real number; in each sub-frame, in the one polarization direction, the pilot symbols are generated based on a target polynomial and a seed, there are $N_{PS}$ pilot symbols combined with $N_{TS}$ training symbols to achieve direct current balance, $N_{TS}$ is a quantity of the training symbols in each sub-frame in one polarization direction, and $N_{TS}+N_{PS}$ is an odd number; and the target polynomial is one item in the following table; and

| Index | Target polynomial |
|---|---|
| 1 | $x^{10}+ x^9+ x^8+ x^7+ x^6+1$ |
| 2 | $x^{10}+ x^9+ x^8+ x^6+ x^4+1$ |
| 3 | $x^{10}+ x^9+ x^7+ x^6+ x^4+1$ |
| 4 | $x^{10}+ x^9+ x^6+ x^3+1$ |
| 5 | $x^{10}+ x^8+ x^5+ x^3+1$ |
| 6 | $x^{10}+ x^8+ x^6+ x^5+ x^3+1$ |
| 7 | $x^{10}+ x^8+ x^7+ x^4+ x^3+1$ |
| 8 | $x^{10}+ x^6+ x^5+ x^4+ x^3+1$ |
| 9 | $x^{10}+ x^9+ x^6+ x^2+1$ |
| 10 | $x^{10}+ x^7+ x^6+ x^2+1$ |
| 11 | $x^{10}+ x^7+ x^5+ x^2+1$ |
| 12 | $x^{10}+ x^8+ x^7+ x^5+ x^2+1$ |
| 13 | $x^{10}+ x^9+ x^8+ x^7+ x^4+ x^2+1$ |
| 14 | $x^{10}+ x^7+ x^5+ x^4+ x^2+1$ |
| 15 | $x^{10}+ x^9+ x^7+ x^5+ x^4+ x^2+1$ |
| 16 | $x^{10}+ x^9+ x^8+ x^3+ x^2+1$ |
| 17 | $x^{10}+ x^9+ x^8+ x^7+ x^3+ x^2+1$ |
| 18 | $x^{10}+ x^7+ x^6+ x^3+ x^2+1$ |
| 19 | $x^{10}+ x^8+ x^5+x+1$ |
| 20 | $x^{10}+ x^8+ x^4+x+1$ |
| 21 | $x^{10}+ x^9+ x^8+ x^7+ x^4+x+1$ |
| 22 | $x^{10}+ x^8+ x^5+ x^4+x+1$ |
| 23 | $x^{10}+ x^5+ x^3+ x+1$ |
| 24 | $x^{10}+ x^8+ x^6+ x^5+ x^3+x+1$ |
| 25 | $x^{10}+ x^9+ x^8+ x^7+ x^4+ x^3+x+1$ |
| 26 | $x^{10}+ x^6+ x^4+ x^3+x+1$ |
| 27 | $x^{10}+ x^8+ x^7+ x^2+x+1$ |
| 28 | $x^{10}+ x^9+ x^8+ x^7+ x^4+ x^2+x+1$ |
| 29 | $x^{10}+ x^9+ x^6+ x^3+ x^2+x+1$ |
| 30 | $x^{10}+ x^8+ x^6+ x^3+ x^2+x+1$ |
| 31 | $x^{10}+ x^6+ x^5+ x^3+ x^2+x+1$ |
| 32 | $x^{10}+ x^4+ x^3+ x^2+x+1$ |
| 33 | $x^{10}+ x^9+ x^7+ x^3+1$ |
| 34 | $x^{10}+ x^9+ x^6+x+1$ |

(continued)

| Index | Target polynomial |
|---|---|
| 35 | $x^{10}+x^9+x^4+x+1$ |
| 36 | $x^{10}+x^7+x^3+x+1$ |

transmitting the super-frame.

According to a ninth aspect, a reception method for optical communication is provided. The method includes: receiving a super-frame including a plurality of sub-frames, where the sub-frame includes training symbols and pilot symbols; in one polarization direction, there is one symbol that is both a training symbol and a pilot symbol, and each of the training symbols and the pilot symbols is one of -A-Aj, -A+Aj, A-Aj, and A+Aj, A being a real number; in each sub-frame, in the one polarization direction, the pilot symbols are generated based on a target polynomial and a seed, there are $N_{PS}$ pilot symbols combined with $N_{TS}$ training symbols to achieve direct current balance, $N_{TS}$ is a quantity of the training symbols in each sub-frame in one polarization direction, and $N_{TS}+N_{PS}$ is an odd number; and the target polynomial is one item in the following table; and

| Index | Target polynomial |
|---|---|
| 1 | $x^{10}+x^9+x^8+x^7+x^6+1$ |
| 2 | $x^{10}+x^9+x^8+x^6+x^4+1$ |
| 3 | $x^{10}x^9+x^7+x^6+x^4+1$ |
| 4 | $x^{10}+x^9+x^6+x^3+1$ |
| 5 | $x^{10}+x^8+x^5+x^3+1$ |
| 6 | $x^{10}+x^8+x^6+x^5+x^3+1$ |
| 7 | $x^{10}+x^8+x^7+x^4+x^3+1$ |
| 8 | $x^{10}+x^6+x^5+x^4+x^3+1$ |
| 9 | $x^{10}+x^9+x^6+x^2+1$ |
| 10 | $x^{10}+x^7+x^6+x^2+1$ |
| 11 | $x^{10}+x^7+x^5+x^2+1$ |
| 12 | $x^{10}+x^8+x^7+x^5+x^2+1$ |
| 13 | $x^{10}+x^9+x^8+x^7+x^4+x^2+1$ |
| 14 | $x^{10}+x^7+x^5+x^4+x^2+1$ |
| 15 | $x^{10}+x^9+x^7+x^5+x^4+x^2+1$ |
| 16 | $x^{10}+x^9+x^8+x^3+x^2+1$ |
| 17 | $x^{10}+x^9+x^8+x^7+x^3+x^2+1$ |
| 18 | $x^{10}+x^7+x^6+x^3+x^2+1$ |
| 19 | $x^{10}+x^8+x^5+x+1$ |
| 20 | $x^{10}+x^8+x^4+x+1$ |
| 21 | $x^{10}+x^9+x^8+x^7+x^4+x+1$ |
| 22 | $x^{10}+x^8+x^5+x^4+x+1$ |
| 23 | $x^{10}+x^5+x^3+x+1$ |
| 24 | $x^{10}+x^8+x^6+x^5+x^3+x+1$ |
| 25 | $x^{10}+x^9+x^8+x^7+x^4+x^3+x+1$ |
| 26 | $x^{10}+x^6+x^4+x^3+x+1$ |
| 27 | $x^{10}+x^8+x^7+x^2+x+1$ |
| 28 | $x^{10}+x^9+x^8+x^7+x^4+x^2+x+1$ |

(continued)

| Index | Target polynomial |
|---|---|
| 29 | $x^{10}+x^9+x^6+x^3+x^2+x+1$ |
| 30 | $x^{10}+x^8+x^6+x^3+x^2+x+1$ |
| 31 | $x^{10}+x^6+x^5+x^3+x^2+x+1$ |
| 32 | $x^{10}+x^4+x^3+x^2+x+1$ |
| 33 | $x^{10}+x^9+x^7+x^3+1$ |
| 34 | $x^{10}+x^9+x^6+x+1$ |
| 35 | $x^{10}+x^9+x^4+x+1$ |
| 36 | $x^{10}+x^7+x^3+x+1$ |

decoding the received super-frame.

In the eighth aspect or the ninth aspect, the pilot symbol is generated based on the target polynomial and the corresponding seed. The target polynomial is any item in the foregoing Table, and the target polynomial and the corresponding seed can meet that a combination of the generated $N_{PS}$ pilot symbols and $N_{TS}$ training symbols achieves direct current balance, that is, in one polarization direction, a sum of real parts of complex numbers corresponding to the training symbols and the pilot symbols in one sub-frame is 0, and a sum of imaginary parts thereof is also 0, which helps a receiver end restore a signal better, and improves quality of the signal at the receiver end.

With reference to the eighth aspect or the ninth aspect, in a possible implementation, in one polarization direction, a total quantity $N_F$ of symbols in the super-frame is 175104, a quantity $N_{SF}$ of sub-frames is 24, a quantity $N_S$ of symbols in each sub-frame is 7296, $N_{TS} = 11$, and $N_{PS} = 114$, a sum $N_{FAW} + N_{RES}$ of a quantity $N_{FAW}$ of frame alignment word symbols and a quantity $N_{RES}$ of reserved symbols is 96, and a quantity of symbols before framing of the super-frame is 172032. Such a super-frame structure can help the receiver end restore a signal better, and improve quality of the signal at the receiver end.

With reference to any one of the eighth aspect, the ninth aspect, or the possible implementations, in another possible implementation, when the target polynomial and hexadecimal seeds in two polarization directions are one row in the following Table, a normalized amplitude of a sidelobe value of a periodic autocorrelation function of pilot symbols in the same polarization direction is not greater than 0.2, and a normalized amplitude of a periodic cross-correlation function value of pilot symbols in different polarization directions is not greater than 0.2:

| Index | Target polynomial | Seed in the direction of polarization 1 | Seed in the direction of polarization 2 |
|---|---|---|---|
| 1 | $x^{10}+x^9+x^8+x^7+x^6+1$ | 0x122 | 0x0E4 |
| 2 | $x^{10}+x^9+x^8+x^7+x^6+1$ | 0x122 | 0x06C |
| 3 | $x^{10}+x^9+x^8+x^7+x^6+1$ | 0x362 | 0x1C4 |
| 4 | $x^{10}+x^9+x^8+x^7+x^6+1$ | 0x362 | 0x0DC |
| 5 | $x^{10}+x^9+x^8+x^7+x^6+1$ | 0x31A | 0x0E4 |
| 6 | $x^{10}+x^9+x^8+x^7+x^6+1$ | 0x31A | 0x06C |
| 7 | $x^{10}+x^9+x^8+x^7+x^6+1$ | 0x046 | 0x384 |
| 8 | $x^{10}+x^9+x^8+x^7+x^6+1$ | 0x046 | 0x3C4 |
| 9 | $x^{10}+x^9+x^8+x^7+x^6+1$ | 0x046 | 0x2DC |
| 10 | $x^{10}+x^9+x^8+x^7+x^6+1$ | 0x246 | 0x348 |
| 11 | $x^{10}+x^9+x^8+x^7+x^6+1$ | 0x246 | 0x1C4 |
| 12 | $x^{10}+x^9+x^8+x^7+x^6+1$ | 0x246 | 0x0DC |
| 13 | $x^{10}+x^9+x^8+x^7+x^6+1$ | 0x0F6 | Ox384 |
| 14 | $x^{10}+x^9+x^8+x^7+x^6+1$ | 0x0F6 | 0x1C4 |
| 15 | $x^{10}+x^9+x^8+x^7+x^6+1$ | 0x0F6 | 0x0DC |

(continued)

| Index | Target polynomial | Seed in the direction of polarization 1 | Seed in the direction of polarization 2 |
|---|---|---|---|
| 16 | $x^{10}+x^9+x^8+x^7+x^6+1$ | 0x08E | 0x0E4 |
| 17 | $x^{10}+x^9+x^8+x^7+x^6+1$ | 0x08E | 0x06C |
| 18 | $x^{10}+x^9+x^8+x^6+x^4+1$ | 0x022 | 0x080 |
| 19 | $x^{10}+x^9+x^8+x^6+x^4+1$ | 0x022 | 0x220 |
| 20 | $x^{10}+x^9+x^8+x^6+x^4+1$ | 0x022 | 0x1FC |
| 21 | $x^{10}+x^9+x^7+x^6+x^4+1$ | 0x3A2 | 0x1A4 |
| 22 | $x^{10}+x^9+x^7+x^6+x^4+1$ | 0x03A | 0x1A4 |
| 23 | $x^{10}+x^9+x^6+x^3+1$ | 0x076 | 0x07C |
| 24 | $x^{10}+x^8+x^5+x^3+1$ | 0x3CE | 0x19C |
| 25 | $x^{10}+x^8+x^6+x^5+x^3+1$ | 0x186 | 0x048 |
| 26 | $x^{10}+x^8+x^6+x^5+x^3+1$ | 0x186 | 0x034 |
| 27 | $x^{10}+x^8+x^7+x^4+x^3+1$ | 0x1A2 | 0x2A0 |
| 28 | $x^{10}+x^8+x^7+x^4+x^3+1$ | 0x1A2 | 0x330 |
| 29 | $x^{10}+x^8+x^7+x^4+x^3+1$ | 0x10A | 0x334 |
| 30 | $x^{10}+x^8+x^7+x^4+x^3+1$ | 0x10A | 0x08C |
| 31 | $x^{10}+x^8+x^7+x^4+x^3+1$ | 0x3EA | 0x350 |
| 32 | $x^{10}+x^8+x^7+x^4+x^3+1$ | 0x3EA | 0x184 |
| 33 | $x^{10}+x^8+x^7+x^4+x^3+1$ | 0x2E6 | 0x2A0 |
| 34 | $x^{10}+x^8+x^7+x^4+x^3+1$ | 0x2E6 | 0x330 |
| 35 | $x^{10}+x^6+x^5+x^4+x^3+1$ | 0x166 | 0x0CC |
| 36 | $x^{10}+x^9+x^6+x^2+1$ | 0x21E | 0x028 |
| 37 | $x^{10}+x^9+x^6+x^2+1$ | 0x21E | 0x014 |
| 38 | $x^{10}+x^7+x^6+x^2+1$ | 0x0BE | 0x1B8 |
| 39 | $x^{10}+x^7+x^5+x^2+1$ | 0x342 | 0x16C |
| 40 | $x^{10}+x^8+x^7+x^5+x^2+1$ | 0x0D6 | 0x0CC |
| 41 | $x^{10}+x^9+x^8+x^7+x^4+x^2+1$ | 0x16A | 0x0DC |
| 42 | $x^{10}+x^9+x^8+x^7+x^4+x^2+1$ | 0x2A6 | 0x0DC |
| 43 | $x^{10}+x^7+x^5+x^4+x^2+1$ | 0x18A | 0x324 |
| 44 | $x^{10}+x^7+x^5+x^4+x^2+1$ | 0x1C6 | 0x324 |
| 45 | $x^{10}+x^9+x^7+x^5+x^4+x^2+1$ | 0x26E | 0x38C |
| 46 | $x^{10}+x^9+x^7+x^5+x^4+x^2+1$ | 0x26E | 0x27C |
| 47 | $x^{10}+x^9+x^8+x^3+x^2+1$ | 0x102 | 0x1F0 |
| 48 | $x^{10}+x^9+x^8+x^3+x^2+1$ | 0x022 | 0x1AC |
| 49 | $x^{10}+x^9+x^8+x^3+x^2+1$ | 0x00A | 0x144 |
| 50 | $x^{10}+x^9+x^8+x^3+x^2+1$ | 0x14A | 0x07C |
| 51 | $x^{10}+x^9+x^8+x^3+x^2+1$ | 0x0A6 | 0x07C |
| 52 | $x^{10}+x^9+x^8+x^3+x^2+1$ | 0x176 | 0x1AC |
| 53 | $x^{10}+x^9+x^8+x^3+x^2+1$ | 0x0BE | 0x07C |
| 54 | $x^{10}+x^9+x^8+x^7+x^3+x^2+1$ | 0x082 | 0x264 |

(continued)

| Index | Target polynomial | Seed in the direction of polarization 1 | Seed in the direction of polarization 2 |
|---|---|---|---|
| 55 | $x^{10}+x^7+x^6+x^3+x^2+1$ | 0x202 | 0x170 |
| 56 | $x^{10}+x^7+x^6+x^3+x^2+1$ | 0x202 | 0x3F4 |
| 57 | $x^{10}+x^7+x^6+x^3+x^2+1$ | 0x142 | 0x2E0 |
| 58 | $x^{10}+x^7+x^6+x^3+x^2+1$ | 0x142 | 0x054 |
| 59 | $x^{10}+x^7+x^6+x^3+x^2+1$ | 0x142 | 0x07C |
| 60 | $x^{10}+x^7+x^6+x^3+x^2+1$ | 0x2EA | 0x150 |
| 61 | $x^{10}+x^7+x^6+x^3+x^2+1$ | 0x306 | 0x220 |
| 62 | $x^{10}+x^7+x^6+x^3+x^2+1$ | 0x306 | 0x094 |
| 63 | $x^{10}+x^8+x^5+x+1$ | 0x3FE | 0x0E0 |
| 64 | $x^{10}+x^8+x^4+x+1$ | 0x28E | 0x0F4 |
| 65 | $x^{10}+x^9+x^8+x^7+x^4+x+1$ | 0x102 | 0x248 |
| 66 | $x^{10}+x^8+x^5+x^4+x+1$ | 0x10A | 0x0EC |
| 67 | $x^{10}+x^5+x^3+x+1$ | 0x1C6 | 0x07C |
| 68 | $x^{10}+x^8+x^6+x^5+x^3+x+1$ | 0x246 | 0x24C |
| 69 | $x^{10}+x^9+x^8+x^7+x^4+x^3+x+1$ | 0x1C6 | 0x130 |
| 70 | $x^{10}+x^6+x^4+x^3+x+1$ | 0x25A | 0x23C |
| 71 | $x^{10}+x^6+x^4+x^3+x+1$ | 0x2F6 | 0x23C |
| 72 | $x^{10}+x^8+x^7+x^2+x+1$ | 0x022 | 0x1CC |
| 73 | $x^{10}+x^8+x^7+x^2+x+1$ | 0x022 | 0x3DC |
| 74 | $x^{10}+x^8+x^7+x^2+x+1$ | 0x226 | 0x1CC |
| 75 | $x^{10}+x^8+x^7+x^2+x+1$ | 0x226 | 0x3DC |
| 76 | $x^{10}+x^8+x^7+x^2+x+1$ | 0x316 | 0x1C4 |
| 77 | $x^{10}+x^8+x^7+x^2+x+1$ | 0x316 | 0x2EC |
| 78 | $x^{10}+x^8+x^7+x^2+x+1$ | 0x12E | 0x1C4 |
| 79 | $x^{10}+x^8+x^7+x^2+x+1$ | 0x12E | 0x2EC |
| 80 | $x^{10}+x^9+x^8+x^7+x^4+x^2+x+1$ | 0x38A | 0x07C |
| 81 | $x^{10}+x^9+x^6+x^3+x^2+x+1$ | 0x252 | 0x398 |
| 82 | $x^{10}+x^9+x^6+x^3+x^2+x+1$ | 0x13A | 0x330 |
| 83 | $x^{10}+x^9+x^6+x^3+x^2+x+1$ | 0x13A | 0x398 |
| 84 | $x^{10}+x^8+x^6+x^3+x^2+x+1$ | 0x31A | 0x310 |
| 85 | $x^{10}+x^8+x^6+x^3+x^2+x+1$ | 0x31A | 0x1C4 |
| 86 | $x^{10}+x^6+x^5+x^3+x^2+x+1$ | 0x262 | 0x3A4 |
| 87 | $x^{10}+x^6+x^5+x^3+x^2+x+1$ | 0x292 | 0x36C |
| 88 | $x^{10}+x^4+x^3+x^2+x+1$ | 0x222 | 0x048 |
| 89 | $x^{10}+x^4+x^3+x^2+x+1$ | 0x222 | 0x138 |
| 90 | $x^{10}+x^4+x^3+x^2+x+1$ | 0x322 | 0x368 |
| 91 | $x^{10}+x^4+x^3+x^2+x+1$ | 0x322 | 0x1D8 |
| 92 | $x^{10}+x^4+x^3+x^2+x+1$ | 0x322 | 0x0E4 |
| 93 | $x^{10}+x^4+x^3+x^2+x+1$ | 0x0E2 | 0x368 |

(continued)

| Index | Target polynomial | Seed in the direction of polarization 1 | Seed in the direction of polarization 2 |
|---|---|---|---|
| 94 | $x^{10}+x^4+x^3+x^2+x+1$ | 0x0E2 | 0x1D8 |
| 95 | $x^{10}+x^4+x^3+x^2+x+1$ | 0x0E2 | 0x0E4 |
| 96 | $x^{10}+x^4+x^3+x^2+x+1$ | 0x07A | 0x2C4 |
| 97 | $x^{10}+x^4+x^3+x^2+x+1$ | 0x07A | 0x3B4 |
| 98 | $x^{10}+x^4+x^3+x^2+x+1$ | 0x04E | 0x2F0 |
| 99 | $x^{10}+x^4+x^3+x^2+x+1$ | 0x04E | 0x224 |
| 100 | $x^{10}+x^4+x^3+x^2+x+1$ | 0x36E | 0x2C4 |
| 101 | $x^{10}+x^4+x^3+x^2+x+1$ | 0x36E | 0x0EC |
| 102 | $x^{10}+x^4+x^3+x^2+x+1$ | 0x21E | 0x368 |
| 103 | $x^{10}+x^4+x^3+x^2+x+1$ | 0x21E | 0x1D8 |

With reference to any one of the eighth aspect, the ninth aspect, or the possible implementations, in another possible implementation, when the target polynomial and hexadecimal seeds in two polarization directions are one row in the following Table, in one polarization direction, in a combination of 114 pilot symbols and 11 training symbols, quantities of -A-Aj, -A+Aj, A-Aj, and A+Aj in one polarization direction are all 31:

| Index | Target polynomial | Seed in the direction of polarization 1 | Seed in the direction of polarization 2 |
|---|---|---|---|
| 1 | $x^{10}+x^9+x^8+x^7+x^6+1$ | 0x046 | 0x384 |
| 2 | $x^{10}+x^9+x^8+x^7+x^6+1$ | 0x046 | 0x3C4 |
| 3 | $x^{10}+x^9+x^6+x^3+1$ | 0x076 | 0x07C |
| 4 | $x^{10}+x^8+x^7+x^4+x^3+1$ | 0x1A2 | 0x330 |
| 5 | $x^{10}+x^8+x^7+x^4+x^3+1$ | 0x2E6 | 0x330 |
| 6 | $x^{10}+x^8+x^7+x^2+x+1$ | 0x226 | 0x3DC |
| 7 | $x^{10}+x^9+x^6+x^3+x^2+x+1$ | 0x13A | 0x330 |
| 8 | $x^{10}+x^4+x^3+x^2+x+1$ | 0x322 | 0x368 |
| 9 | $x^{10}+x^4+x^3+x^2+x+1$ | 0x322 | 0x0E4 |
| 10 | $x^{10}+x^4+x^3+x^2+x+1$ | 0x0E2 | 0x368 |
| 11 | $x^{10}+x^4+x^3+x^2+x+1$ | 0x0E2 | 0x0E4 |
| 12 | $x^{10}+x^4+x^3+x^2+x+1$ | 0x04E | 0x2F0 |

With reference to any one of the eighth aspect, the ninth aspect, or the possible implementations, when the target polynomial is a primitive polynomial and there are no more than 5 non-zero terms of the target polynomial, and when the target polynomial and hexadecimal seeds in two polarization directions are one row in the following Table, a normalized amplitude of a sidelobe value of a periodic autocorrelation function of pilot symbols in the same polarization direction is not greater than 0.25, and a normalized amplitude of a periodic cross-correlation function value of pilot symbols in different polarization directions is not greater than 0.25:

| Index | Target polynomial | Seed in the direction of polarization 1 | Seed in the direction of polarization 2 |
|---|---|---|---|
| 1 | $x^{10}+x^9+x^7+x^3+1$ | 0x23E | 0x094 |
| 2 | $x^{10}+x^7+x^6+x^2+1$ | 0x0BE | 0x1B8 |
| 3 | $x^{10}+x^9+x^6+x+1$ | 0x002 | 0x210 |
| 4 | $x^{10}+x^9+x^6+x+1$ | 0x002 | 0x308 |

(continued)

| Index | Target polynomial | Seed in the direction of polarization 1 | Seed in the direction of polarization 2 |
|---|---|---|---|
| 5 | $x^{10}+x^9+x^6+x+1$ | 0x002 | 0x184 |
| 6 | $x^{10}+x^9+x^6+x+1$ | 0x1C2 | 0x040 |
| 7 | $x^{10}+x^8+x^5+x+1$ | 0x3FE | 0x0E0 |
| 8 | $x^{10}+x^8+x^5+x+1$ | 0x3FE | 0x270 |
| 9 | $x^{10}+x^8+x^5+x+1$ | 0x3FE | 0x304 |
| 10 | $x^{10}+x^9+x^4+x+1$ | 0x3B6 | 0x1A0 |
| 11 | $x^{10}+x^9+x^4+x+1$ | 0x3B6 | 0x0D0 |
| 12 | $x^{10}+x^9+x^4+x+1$ | 0x3B6 | 0x058 |
| 13 | $x^{10}+x^9+x^4+x+1$ | 0x3B6 | 0x22C |
| 14 | $x^{10}+x^7+x^3+x+1$ | 0x34E | 0x084 |

With reference to any one of the eighth aspect, the ninth aspect, or the possible implementations, in another possible implementation, when the target polynomial is $x^{10}+x^7+x^3+x+1$, and the corresponding hexadecimal seeds in the two polarization directions are 0x34E and 0x084, in one polarization direction, in a combination of 114 pilot symbols and 11 training symbols, quantities of -A-Aj, -A+Aj, A-Aj, and A+Aj in the one polarization direction are all 31, and the respective 114 pilot symbols in the two polarization directions are shown in the following table:

| Polarization direction | Pilot symbol |
|---|---|
| Polarization 1 | -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, -A-Aj, -A-Aj, -A+Aj, -A-Aj, -A+Aj, -A-Aj, -A-Aj, A+Aj, A+Aj, -A-Aj, A+Aj, A+Aj, -A+Aj, A-Aj, -A+Aj, A-Aj, -A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, -A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, -A+Aj, -A+Aj, -A-Aj, -A-Aj, -A+Aj, -A+Aj, -A+Aj, A-Aj, -A+Aj, -A+Aj, A-Aj, -A+Aj, -A-Aj, A-Aj, A+Aj, -A+Aj, -A-Aj, A-Aj, A-Aj, -A-Aj, A+Aj, A+Aj |
| Polarization 2 | -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, -A-Aj, A-Aj, -A+Aj, -A+Aj, A-Aj, A-Aj, -A+Aj, -A-Aj, -A+Aj, A+Aj, A+Aj, -A-Aj, -A+Aj, -A+Aj, -A-Aj, A+Aj, A+Aj, A-Aj, -A+Aj, A-Aj, -A-Aj, -A-Aj, -A+Aj, A-Aj, -A+Aj, -A-Aj, -A+Aj, A-Aj, A+Aj, A-Aj, -A-Aj, A+Aj, -A+Aj, A-Aj, -A-Aj, A+Aj, A+Aj, -A+Aj, -A+Aj, -A-Aj, -A-Aj, A+Aj, -A-Aj, -A+Aj, -A+Aj, -A+Aj, A+Aj, -A+Aj, A+Aj, A+Aj, A+Aj, -A+Aj, A+Aj, -A-Aj, -A-Aj, A-Aj, -A+Aj, -A+Aj, A+Aj, A-Aj, A+Aj, -A+Aj, A+Aj, A-Aj, A-Aj, A+Aj, -A-Aj, A+Aj, A+Aj, A-Aj, A+Aj, A+Aj, -A-Aj, A+Aj, -A+Aj, -A-Aj, A-Aj, A-Aj, A-Aj, A+Aj, -A+Aj, -A-Aj, -A-Aj, -A+Aj, A+Aj, -A-Aj, A-Aj, A-Aj, -A+Aj, -A-Aj, A-Aj, A-Aj, -A+Aj |

With reference to any one of the eighth aspect, the ninth aspect, or the possible implementations, in another possible implementation, when the target polynomial is $x^{10}+x^7+x^6+x^2+1$, and the corresponding hexadecimal seeds in the two polarization directions are 0x0BE and 0x1B8, the respective 114 pilot symbols in the two polarization directions are shown in the following table:

| Polarization direction | Pilot symbol |
|---|---|
| Polarization 1 | -A+Aj, A+Aj, A+Aj, -A+Aj, -A-Aj, -A+Aj, -A-Aj, -A+Aj, -A+Aj, A-Aj, A+Aj, A-Aj, -A-Aj, -A+Aj, -A+Aj, A-Aj, -A-Aj, A+Aj, -A+Aj, A-Aj, -A-Aj, -A+Aj, A-Aj, -A+Aj, -A-Aj, A-Aj, A-Aj, -A-Aj, A+Aj, A+Aj, -A-Aj, A+Aj, A-Aj, -A-Aj, -A+Aj, A+Aj, A+Aj, A-Aj, -A+Aj, -A-Aj, A+Aj, -A-Aj, A-Aj, -A-Aj, -A+Aj, A+Aj, -A-Aj, A+Aj, -A-Aj, A+Aj, A-Aj, A+Aj, -A-Aj, A-Aj, -A-Aj, A+Aj, A-Aj, A-Aj, -A+Aj, -A+Aj, A-Aj, A-Aj, -A-Aj, A-Aj, A-Aj, A+Aj, -A+Aj, A+Aj, A-Aj, -A+Aj, -A-Aj, -A+Aj, -A+Aj, -A-Aj, A-Aj, -A-Aj, A-Aj, -A-Aj, -A-Aj, A-Aj, A+Aj, -A+Aj, -A+Aj, -A+Aj, A-Aj, -A-Aj, A-Aj, -A+Aj, -A+Aj, -A+Aj, -A+Aj, -A-Aj, A+Aj, -A+Aj, -A+Aj, -A+Aj, A-Aj, -A+Aj, -A-Aj, A+Aj, A-Aj, A+Aj, A-Aj, A+Aj, A-Aj, -A+Aj, A+Aj, A+Aj, -A+Aj, A-Aj, -A-Aj, A- |
|  | Aj, A+Aj, -A-Aj, A+Aj |
| Polarization 2 | -A-Aj, -A+Aj, A+Aj, -A+Aj, A-Aj, A+Aj, -A+Aj, A+Aj, -A+Aj, -A-Aj, -A+Aj, A-Aj, -A-Aj, A+Aj, -A-Aj, A-Aj, A+Aj, -A-Aj, A-Aj, A+Aj, A-Aj, A+Aj, -A+Aj, -A-Aj, A-Aj, -A-Aj, -A-Aj, -A+Aj, A-Aj, -A-Aj, A-Aj, -A-Aj, -A+Aj, A-Aj, -A-Aj, -A-Aj, -A+Aj, A+Aj, -A-Aj, -A+Aj, -A+Aj, -A+Aj, -A-Aj, A-Aj, -A+Aj, A-Aj, A+Aj, -A+Aj, A-Aj, -A+Aj, A+Aj, -A-Aj, A-Aj, A-Aj, -A+Aj, -A+Aj, -A+Aj, A+Aj, -A+Aj, -A+Aj, A+Aj, -A-Aj, A+Aj, -A+Aj, A+Aj, -A+Aj, A-Aj, -A-Aj, -A-Aj, A-Aj, A-Aj, -A+Aj, A-Aj, -A-Aj, A-Aj, A-Aj, -A-Aj, -A-Aj, A-Aj, - A+Aj, -A-Aj, A+Aj, A+Aj, A+Aj, -A+Aj, A-Aj, A-Aj, A+Aj, -A+Aj, A-Aj, A-Aj, A-Aj, -A+Aj, -A+Aj, A+Aj, A-Aj, A+Aj, A+Aj, A-Aj, -A+Aj, A+Aj, A-Aj, -A+Aj, -A+Aj, -A+Aj, A-Aj, -A+Aj, A-Aj, A-Aj, -A-Aj, -A+Aj, A+Aj, A-Aj, A-Aj |

With reference to any one of the eighth aspect, the ninth aspect, or the possible implementations, in another possible implementation, in one polarization direction, a total quantity $N_F$ of symbols in the super-frame is 175104, a quantity $N_{SF}$ of sub-frames is 48, a quantity $N_S$ of symbols in each sub-frame is 3648, $N_{TS} = 6$, and $N_{PS} = 57$, a sum $N_{FAW} + N_{RES}$ of a quantity $N_{FAW}$ of frame alignment word symbols and a quantity $N_{RES}$ of reserved symbols is 96, and a quantity of symbols before framing of the super-frame is 172032.

With reference to any one of the eighth aspect, the ninth aspect, or the possible implementations, in another possible implementation, when the target polynomial and hexadecimal seeds in two polarization directions are one row in the following Table, a normalized amplitude of a sidelobe value of a periodic autocorrelation function of pilot symbols in the same polarization direction is not greater than 0.23, and a normalized amplitude of a periodic cross-correlation function value of pilot symbols in different polarization directions is not greater than 0.23:

| Index | Target polynomial | Seed in the direction of polarization 1 | Seed in the direction of polarization 2 |
|---|---|---|---|
| 1 | $x^{10} + x^7 + x^3 + x + 1$ | 0x204 | 0x279 |
| 2 | $x^{10} + x^7 + x^3 + x + 1$ | 0x0B1 | 0x3E9 |
| 3 | $x^{10} + x^7 + x^3 + x + 1$ | 0x0B1 | 0x279 |

With reference to any one of the eighth aspect, the ninth aspect, or the possible implementations, in another possible implementation, when the target polynomial is $x^{10} + x^7 + x^3 + x + 1$, and the corresponding hexadecimal seeds in the two polarization directions are 0x0B1 and 0x3E9, the respective 57 pilot symbols in the two polarization directions are shown in the following table:

| Polarization direction | Pilot symbol |
|---|---|
| Polarization 1 | A-Aj, -A-Aj, A+Aj, -A+Aj, -A-Aj, -A+Aj, A+Aj, -A-Aj, -A+Aj, A+Aj, A+Aj, A-Aj, -A-Aj, -A+Aj, A+Aj, A+Aj, -A+Aj, -A+Aj, A+Aj, -A+Aj, -A+Aj, A-Aj, A+Aj, A-Aj, A+Aj, A-Aj, A+Aj, -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, -A-Aj, A-Aj, -A+Aj, -A+Aj, A-Aj, A-Aj, -A+Aj, -A-Aj, -A+Aj |
| Polarization 2 | A-Aj, -A+Aj, -A+Aj, A+Aj, A+Aj, A+Aj, A+Aj, A-Aj, -A-Aj, A+Aj, A-Aj, A+Aj, A-Aj, -A+Aj, -A+Aj, A-Aj, A+Aj, -A+Aj, A-Aj, -A-Aj, -A+Aj, A-Aj, -A+Aj, A-Aj, -A-Aj, A-Aj, -A-Aj, A-Aj, A-Aj, -A-Aj, A+Aj, - A+Aj, -A+Aj, -A+Aj, -A+Aj, -A+Aj, A+Aj, A-Aj, A-Aj, -A+Aj, -A+Aj, A+Aj, -A-Aj, A-Aj, -A+Aj, -A-Aj, A-Aj, -A-Aj, -A-Aj, A-Aj, -A-Aj, A-Aj, -A-Aj, A-Aj, -A-Aj, -A+Aj, A+Aj, A-Aj, -A+Aj |

According to a tenth aspect, a transmitting device for optical communication is provided. The transmitting device includes a processor and a memory. The memory is configured to store instructions, and the processor is configured to execute the instructions, to cause the transmitting device to perform the method in any one of the eighth aspect or the possible implementations of the eighth aspect.

According to an eleventh aspect, a receiving device for optical communication is provided. The transmitting device includes a processor and a memory. The memory is configured to store instructions, and the processor is configured to execute the instructions, to cause the receiving device to perform the method in any one of the ninth aspect or the possible implementations of the ninth aspect.

According to a twelfth aspect, a system for optical communication is provided. The system includes the transmitting device according to the tenth aspect and the receiving device according to the tenth aspect.

It should be understood that the processor may be a central processing unit (Central Processing Unit, "CPU" for short), or may be another general-purpose processor, a digital signal processor (DSP), an applicationspecific integrated circuit (ASIC), a field-programmable gate array (FPGA) or another programmable logic device, a discrete gate or a transistor logic device, a discrete hardware component, or the like. The general-purpose processor may be a microprocessor, or the processor may be any conventional processor or the like, which is not limited in embodiments of this application.

According to a thirteenth aspect, a computer-readable storage medium is provided. The computer-readable storage medium stores instructions that, when executed on a terminal device, cause the terminal device to perform the method in any one of the eighth aspect or the possible implementations of the eighth aspect, or cause the terminal device to perform the method in any one of the ninth aspect or the possible implementations of the ninth aspect.

According to a fourteenth aspect, a computer program product including instructions is provided. The computer program product, when run on a terminal device, causes the terminal device to perform the method according to any one of the eighth aspect or the possible implementations of the eighth aspect, or causes the terminal device to perform the method according to any one of the ninth aspect or the possible implementations of the ninth aspect. It should be understood that the terminal device may be a chip, a processor, or the like, which is not limited in this application.

According to a fifteenth aspect, a transmission method for optical communication is provided. The method includes: generating a super-frame including a plurality of sub-frames, where the sub-frame includes training symbols and pilot symbols; in each sub-frame, in one polarization direction, there are $N_{PS}$ pilot symbols, a value of which is one of $-A_2-A_2j$, $-A_2+A_2j$, $A_2-A_2j$, and $A_2+A_2j$, $A_2$ being a real number, and $N_{PS}$ being an even number; the $N_{PS}$ pilot symbols achieve direct current balance, and a combination of the training symbols and the $N_{PS}$ pilot symbols achieves direct current balance; the pilot symbols are generated based on a target polynomial and a seed, the target polynomial is a primitive polynomial, and there are no more than 5 non-zero terms of the target polynomial; and the target polynomial is one item in the following Table; and

| Index | Target polynomial |
|---|---|
| 1 | $x^{10}+x^9+x^7+x^6+1$ |
| 2 | $x^{10}+x^9+x^7+x^3+1$ |
| 3 | $x^{10}+x^8+x^4+x^3+1$ |
| 4 | $x^{10}+x^7+x^6+x^2+1$ |
| 5 | $x^{10}+x^9+x^6+x+1$ |
| 6 | $x^{10}+x^9+x^4+x+1$ |
| 7 | $x^{10}+x^7+x^3+x+1$ |
| 8 | $x^{10}+x^4+x^3+x+1$ |

transmitting the super-frame.

According to a sixteenth aspect, a reception method for optical communication is provided. The method includes: receiving a super-frame including a plurality of sub-frames, where the sub-frame includes training symbols and pilot symbols; in each sub-frame, in one polarization direction, there are $N_{PS}$ pilot symbols, a value of which is one of $-A_2-A_2j$, $-A_2+A_2j$, $A_2-A_2j$, and $A_2+A_2j$, $A_2$ being a real number, and $N_{PS}$ being an even number; the $N_{PS}$ pilot symbols achieve direct current balance, and a combination of the training symbols and the $N_{PS}$ pilot symbols achieves direct current balance; the pilot symbols are generated based on a target polynomial and a seed, the target polynomial is a primitive polynomial, and there are no more than 5 non-zero terms of the target polynomial; and the target polynomial is one item in the following Table; and

| Index | Target polynomial |
|---|---|
| 1 | $x^{10}+x^9+x^7+x^6+1$ |
| 2 | $x^{10}+x^9+x^7+x^3+1$ |
| 3 | $x^{10}+x^8+x^4+x^3+1$ |
| 4 | $x^{10}+x^7+x^6+x^2+1$ |
| 5 | $x^{10}+x^9+x^6+x+1$ |
| 6 | $x^{10}+x^9+x^4+x+1$ |
| 7 | $x^{10}+x^7+x^3+x+1$ |
| 8 | $x^{10}+x^4+x^3+x+1$ |

decoding the received super-frame.

In the fifteenth aspect or the sixteenth aspect, the pilot symbols are generated based on the target polynomial and the seed. The target polynomial is any item in the foregoing Table, and the target polynomial and the corresponding seed can meet that the $N_{PS}$ pilot symbols achieve direct current balance, and that a combination of the training symbols and the $N_{PS}$ pilot symbols achieves direct current balance, which helps a receiver end restore a signal better, and improves quality of the signal at the receiver end.

With reference to the fifteenth aspect or the sixteenth aspect, in a possible implementation, in one polarization direction, a total quantity $N_F$ of symbols in the super-frame is 175104, a quantity $N_{SF}$ of sub-frames is 24, a quantity $N_S$ of symbols in each sub-frame is 7296, $N_{PS} = 114$, a sum $N_{FAW} + N_{RES}$ of a quantity $N_{FAW}$ of frame alignment word symbols and a quantity $N_{RES}$ of reserved symbols is 96, and a quantity of symbols before framing of the super-frame is 172032; and when the target polynomial for generating the pilot symbols and hexadecimal seeds in two polarization directions are one row in the following Table, a normalized amplitude of a sidelobe value of a periodic autocorrelation function of pilot symbols in the same polarization direction is not greater than 0.25, and a normalized amplitude of a periodic cross-correlation function value of pilot symbols in different polarization directions is not greater than 0.25:

| Index | Target polynomial | Seed in the direction of polarization 1 | Seed in the direction of polarization 2 |
|---|---|---|---|
| 1 | $x^{10}+x^9+x^7+x^6+1$ | 0x002 | 0x3C6 |
| 2 | $x^{10}+x^9+x^7+x^6+1$ | 0x002 | 0x38D |
| 3 | $x^{10}+x^9+x^7+x^3+1$ | 0x094 | 0x11F |
| 4 | $x^{10}+x^9+x^7+x^3+1$ | 0x129 | 0x11F |
| 5 | $x^{10}+x^8+x^4+x^3+1$ | 0x07A | 0x167 |
| 6 | $x^{10}+x^8+x^4+x^3+1$ | 0x07A | 0x2CF |
| 7 | $x^{10}+x^7+x^6+x^2+1$ | 0x1B8 | 0x22F |
| 8 | $x^{10}+x^7+x^6+x^2+1$ | 0x1B8 | 0x05F |
| 9 | $x^{10}+x^9+x^6+x+1$ | 0x040 | 0x210 |
| 10 | $x^{10}+x^9+x^6+x+1$ | 0x040 | 0x308 |
| 11 | $x^{10}+x^9+x^6+x+1$ | 0x040 | 0x184 |
| 12 | $x^{10}+x^9+x^6+x+1$ | 0x040 | 0x0C2 |
| 13 | $x^{10}+x^9+x^6+x+1$ | 0x040 | 0x0E1 |
| 14 | $x^{10}+x^9+x^6+x+1$ | 0x040 | 0x0D7 |
| 15 | $x^{10}+x^9+x^6+x+1$ | 0x040 | 0x1AF |
| 16 | $x^{10}+x^9+x^6+x+1$ | 0x210 | 0x201 |
| 17 | $x^{10}+x^9+x^6+x+1$ | 0x308 | 0x201 |
| 18 | $x^{10}+x^9+x^6+x+1$ | 0x184 | 0x201 |
| 19 | $x^{10}+x^9+x^6+x+1$ | 0x0C2 | 0x201 |

(continued)

| Index | Target polynomial | Seed in the direction of polarization 1 | Seed in the direction of polarization 2 |
|---|---|---|---|
| 20 | $x^{10}+x^9+x^6+x+1$ | 0x201 | 0x0E1 |
| 21 | $x^{10}+x^9+x^6+x+1$ | 0x201 | 0x0D7 |
| 22 | $x^{10}+x^9+x^6+x+1$ | 0x201 | 0x1AF |
| 23 | $x^{10}+x^9+x^4+x+1$ | 0x1A0 | 0x2D9 |
| 24 | $x^{10}+x^9+x^4+x+1$ | 0x1A0 | 0x3DB |
| 25 | $x^{10}+x^9+x^4+x+1$ | 0x0D0 | 0x2D9 |
| 26 | $x^{10}+x^9+x^4+x+1$ | 0x0D0 | 0x3DB |
| 27 | $x^{10}+x^9+x^4+x+1$ | 0x058 | 0x2D9 |
| 28 | $x^{10}+x^9+x^4+x+1$ | 0x058 | 0x3DB |
| 29 | $x^{10}+x^9+x^4+x+1$ | 0x22C | 0x2D9 |
| 30 | $x^{10}+x^9+x^4+x+1$ | 0x22C | 0x3DB |
| 31 | $x^{10}+x^9+x^4+x+1$ | 0x2D2 | 0x2D9 |
| 32 | $x^{10}+x^9+x^4+x+1$ | 0x2D2 | 0x3DB |
| 33 | $x^{10}+x^9+x^4+x+1$ | 0x2D9 | 0x1A5 |
| 34 | $x^{10}+x^9+x^4+x+1$ | 0x2D9 | 0x3DD |
| 35 | $x^{10}+x^9+x^4+x+1$ | 0x1A5 | 0x3DB |
| 36 | $x^{10}+x^9+x^4+x+1$ | 0x3DD | 0x3DB |
| 37 | $x^{10}+x^7+x^3+x+1$ | 0x084 | 0x1A7 |
| 38 | $x^{10}+x^7+x^3+x+1$ | 0x109 | 0x1A7 |
| 39 | $x^{10}+x^4+x^3+x+1$ | 0x365 | 0x3EB |
| 40 | $x^{10}+x^4+x^3+x+1$ | 0x2CB | 0x3EB |

With reference to any one of the fifteenth aspect, the sixteenth aspect, or the possible implementations, in another possible implementation, when the target polynomial is $x^{10}+ x^9+ x^7+ x^6+ 1$, and the corresponding hexadecimal seeds in the two polarization directions are 0x002 and 0x3C6, the respective 114 pilot symbols in the two polarization directions are shown in the following table:

| Polarization direction | Pilot symbol |
|---|---|
| Polarization 1 | $-A_2+A_2j$, $-A_2-A_2j$, $-A_2-A_2j$, $-A_2-A_2j$, $-A_2-A_2j$, $-A_2+A_2j$, $A_2+A_2j$, $-A_2-A_2j$, $-A_2+A_2j$, $A_2+A_2j$, $-A_2+A_2j$, $-A_2-A_2j$, $A_2-A_2j$, $-A_2-A_2j$, $-A_2+A_2j$, $A_2-A_2j$, $A_2+A_2j$, $A_2-A_2j$, $-A_2-A_2j$, $A_2-A_2j$, $A_2-A_2j$, $-A_2-A_2j$, $-A_2-A_2j$, $-A_2-A_2j$, $A_2+A_2j$, $-A_2+A_2j$, $A_2-A_2j$, $A_2+A_2j$, $-A_2+A_2j$, $-A_2-A_2j$, $A_2+A_2j$, $-A_2+A_2j$, $-A_2-A_2j$, $A_2+A_2j$, $A_2-A_2j$, $A_2-A_2j$, $A_2+A_2j$, $-A_2+A_2j$, $-A_2-A_2j$, $-A_2+A_2j$, $-A_2-A_2j$, $-A_2-A_2j$, $-A_2+A_2j$, $A_2+A_2j$, $-A_2+A_2j$, $A_2-A_2j$, $A_2+A_2j$, $-A_2-A_2j$, $A_2+A_2j$, $A_2+A_2j$, $-A_2-A_2j$, $A_2+A_2j$, $A_2-A_2j$, $A_2-A_2j$, $-A_2-A_2j$, $A_2+A_2j$, $-A_2-A_2j$, $A_2-A_2j$, $A_2-A_2j$, $A_2-A_2j$, $-A_2-A_2j$, $A_2+A_2j$, $-A_2+A_2j$, $-A_2+A_2j$, $A_2-A_2j$, $A_2+A_2j$, $A_2+A_2j$, $A_2-A_2j$, $-A_2+A_2j$, $A_2+A_2j$, $A_2-A_2j$, $A_2-A_2j$, $- A_2+A_2j$, $-A_2+A_2j$, $A_2+A_2j$, $A_2+A_2j$, $-A_2-A_2j$, $-A_2-A_2j$, $-A_2+A_2j$, $-A_2+A_2j$, $A_2+A_2j$, $-A_2-A_2j$, $-A_2+A_2j$, $A_2-A_2j$, $A_2-A_2j$, $-A_2-A_2j$, $A_2+A_2j$, $A_2+A_2j$, $-A_2-A_2j$, $A_2-A_2j$, $-A_2+A_2j$, $A_2-A_2j$, $-A_2+A_2j$, $-A_2-A_2j$, $-A_2+A_2j$, $A_2-A_2j$, $- A_2-A_2j$, $A_2-A_2j$, $-A_2+A_2j$, $-A_2+A_2j$, $A_2-A_2j$, $A_2+A_2j$, $A_2-A_2j$, $-A_2+A_2j$, $-A_2+A_2j$, $A_2-A_2j$, $-A_2+A_2j$, $A_2+A_2j$, $- A_2+A_2j$, $A_2+A_2j$, $A_2+A_2j$, $A_2-A_2j$, $A_2-A_2j$, $A_2+A_2j$ |

(continued)

| Polarization direction | Pilot symbol |
|---|---|
| Polarization 2 | $-A_2+A_2j$, $A_2-A_2j$, $-A_2-A_2j$, $A_2+A_2j$, $A_2+A_2j$, $A_2-A_2j$, $A_2+A_2j$, $-A_2+A_2j$, $-A_2-A_2j$, $-A_2-A_2j$, $A_2+A_2j$, $-A_2-A_2j$, $-A_2-A_2j$, $-A_2-A_2j$, $-A_2-A_2j$, $A_2-A_2j$, $-A_2+A_2j$, $-A_2-A_2j$, $A_2-A_2j$, $-A_2+A_2j$, $A_2+A_2j$, $-A_2+A_2j$, $A_2-A_2j$, $-A_2-A_2j$, $A_2-A_2j$, $A_2+A_2j$, $-A_2-A_2j$, $A_2-A_2j$, $-A_2+A_2j$, $A_2+A_2j$, $A_2-A_2j$, $-A_2-A_2j$, $-A_2-A_2j$, $-A_2+A_2j$, $-A_2+A_2j$, $A_2-A_2j$, $A_2+A_2j$, $-A_2+A_2j$, $A_2+A_2j$, $-A_2+A_2j$, $-A_2+A_2j$, $A_2+A_2j$, $-A_2+A_2j$, $-A_2-A_2j$, $A_2+A_2j$, $A_2+A_2j$, $-A_2+A_2j$, $A_2+A_2j$, $-A_2-A_2j$, $A_2+A_2j$, $-A_2-A_2j$, $-A_2-A_2j$, $A_2-A_2j$, $-A_2+A_2j$, $A_2-A_2j$, $A_2+A_2j$, $-A_2+A_2j$, $-A_2+A_2j$, $-A_2-A_2j$, $-A_2+A_2j$, $-A_2+A_2j$, $-A_2-A_2j$, $A_2+A_2j$, $A_2-A_2j$, $-A_2+A_2j$, $-A_2+A_2j$, $-A_2+A_2j$, $A_2+A_2j$, $A_2+A_2j$, $A_2-A_2j$, $-A_2+A_2j$, $-A_2+A_2j$, $A_2+A_2j$, $A_2-A_2j$, $A_2+A_2j$, $-A_2-A_2j$, $-A_2-A_2j$, $A_2-A_2j$, $A_2-A_2j$, $-A_2-A_2j$, $A_2+A_2j$, $A_2-A_2j$, $A_2+A_2j$, $A_2-A_2j$, $-A_2-A_2j$, $-A_2+A_2j$, $-A_2-A_2j$, $-A_2-A_2j$, $A_2+A_2j$, $A_2-A_2j$, $-A_2+A_2j$, $-A_2-A_2j$, $A_2-A_2j$, $A_2+A_2j$, $A_2-A_2j$, $-A_2+A_2j$, $-A_2-A_2j$, $-A_2+A_2j$, $-A_2+A_2j$, $A_2-A_2j$, $A_2-A_2j$, $A_2-A_2j$, $A_2+A_2j$, $-A_2-A_2j$, $A_2-A_2j$, $A_2-A_2j$, $-A_2+A_2j$, $A_2-A_2j$, $A_2+A_2j$, $A_2-A_2j$, $A_2+A_2j$, $-A_2-A_2j$, $A_2-A_2j$, $A_2+A_2j$ |

With reference to any one of the fifteenth aspect, the sixteenth aspect, or the possible implementations, in another possible implementation, in each sub-frame, in one polarization direction, when a remainder of the quantity of the pilot symbols divided by 4 is 0, in the pilot symbols included in each sub-frame, a quantity of $-A_2-A_2j$ is equal to a quantity of $A_2+A_2j$, a quantity of $-A_2+A_2j$ is equal to a quantity of $A_2-A_2j$, and a difference between the quantity of $-A_2-A_2j$ and a quantity of is 2; or the quantities of $-A_2-A_2j$, $-A_2+A_2j$, $A_2-A_2j$, and $A_2+A_2j$ are equal; and
when a remainder of the quantity of the pilot symbols divided by 4 is 2, in the pilot symbols included in each sub-frame, a quantity of $-A_2-A_2j$ is equal to a quantity of $A_2+A_2j$, a quantity of $-A_2+A_2j$ is equal to a quantity of $A_2-A_2j$, and a difference between the quantity of $-A_2-A_2j$ and a quantity of is 1.

According to a seventeenth aspect, a transmitting device for optical communication is provided. The transmitting device includes a processor and a memory. The memory is configured to store instructions, and the processor is configured to execute the instructions, to cause the transmitting device to perform the method in any one of the fifteenth aspect or the possible implementations of the fifteenth aspect.

According to an eighteenth aspect, a receiving device for optical communication is provided. The transmitting device includes a processor and a memory. The memory is configured to store instructions, and the processor is configured to execute the instructions, to cause the receiving device to perform the method in any one of the sixteenth aspect or the possible implementations of the sixteenth aspect.

According to a nineteenth aspect, a system for optical communication is provided. The system includes the transmitting device according to the seventeenth aspect and the receiving device according to the eighteenth aspect.

It should be understood that the processor may be a central processing unit (Central Processing Unit, "CPU" for short), or may be another general-purpose processor, a digital signal processor (DSP), an applicationspecific integrated circuit (ASIC), a field-programmable gate array (FPGA) or another programmable logic device, a discrete gate or a transistor logic device, a discrete hardware component, or the like. The general-purpose processor may be a microprocessor, or the processor may be any conventional processor or the like, which is not limited in embodiments of this application.

According to a twentieth aspect, a computer-readable storage medium is provided. The computer-readable storage medium stores instructions that, when executed on a terminal device, cause the terminal device to perform the method in any one of the fifteenth aspect or the possible implementations of the fifteenth aspect, or cause the terminal device to perform the method in any one of the sixteenth aspect or the possible implementations of the sixteenth aspect.

According to a twenty-first aspect, a computer program product including instructions is provided. The computer program product, when run on a terminal device, causes the terminal device to perform the method in any one of the fifteenth aspect or the possible implementations of the fifteenth aspect, or causes the terminal device to perform the method in any one of the sixteenth aspect or the possible implementations of the sixteenth aspect. It should be understood that the terminal device may be a chip, a processor, or the like, which is not limited in this application.

In the foregoing embodiments of this application, in each polarization direction, a difference between quantities of $-A-Aj$, $-A+Aj$, $A-Aj$, and $A+Aj$ that represent the training symbols and the pilot symbols is not greater than 1, thereby effectively ensuring equalization between symbols. In addition, in each polarization direction, a sum of real parts of the complex numbers corresponding to the training symbols and the pilot symbols in one sub-frame is 0, and a sum of imaginary parts thereof is also 0, so that direct current balance can be achieved, which facilitates quality of a signal restored at the receiver end.

**BRIEF DESCRIPTION OF DRAWINGS**

FIG. 1 is a block diagram of a structure of a communication system;

FIG. 2 is a schematic diagram of a framing process;

FIG. 3 is a schematic diagram of another framing process;

FIG. 4 is a flowchart of a transmission method for optical communication according to this application;

FIG. 5A is a schematic diagram of positions of training symbols or pilot symbols in a constellation diagram for DP-16QAM;

FIG. 5B is another schematic diagram of positions of training symbols or pilot symbols in a constellation diagram for DP-16QAM;

FIG. 6 shows a diagram of a structure of a super-frame, a diagram of a structure of a first-type sub-frame in the super-frame, and a diagram of a structure of a second-type sub-frame in the super-frame according to this application;

FIG. 7 shows a mapping relationship between a DP-QPSK symbol and a bit;

FIG. 8 shows a mapping relationship between a DP-16QAM symbol and a bit;

FIG. 9 shows diagrams of structures of a specific super-frame, the $1^{st}$ sub-frame in the super-frame, and another sub-frame other than the $1^{st}$ sub-frame in the super-frame according to an embodiment of this application;

FIG. 10 shows a graph of an aperiodic autocorrelation result of a specific frame alignment word sequence in an X polarization direction, a graph of an aperiodic autocorrelation result of the specific frame alignment word sequence in a Y polarization direction, and a graph of an aperiodic cross-correlation result of the specific frame alignment word sequence in the two polarization directions according to an embodiment of this application;

FIG. 11 shows a graph of an aperiodic autocorrelation result of a specific training sequence in an X polarization direction, a graph of an aperiodic autocorrelation result of the specific training sequence in a Y polarization direction, and a graph of an aperiodic cross-correlation result of the specific training sequence in the two polarization directions according to an embodiment of this application;

FIG. 12 shows a graph of a periodic autocorrelation result of a specific pilot sequence in an X polarization direction, a graph of a periodic autocorrelation result of the specific pilot sequence in a Y polarization direction, and a graph of a periodic cross-correlation result of the specific pilot sequence in the two polarization directions according to an embodiment of this application;

FIG. 13 shows a spectrum diagram of a super-frame for DP-16QAM and a spectrum diagram of a random DP-16QAM signal when the super-frame structure shown in FIG. 9 is used;

FIG. 14 shows a spectrum diagram of a super-frame for DP-QPSK and a spectrum diagram of a random DP-QPSK signal when the super-frame structure shown in FIG. 9 is used;

FIG. 15 shows a diagram of a structure of a specific super-frame, a diagram of a structure of the $1^{st}$ sub-frame in the specific super-frame, and a diagram of a structure of another sub-frame other than the $1^{st}$ sub-frame in the specific super-frame according to another embodiment of this application;

FIG. 16 shows a graph of an aperiodic autocorrelation result of a specific frame alignment word sequence in an X polarization direction, a graph of an aperiodic autocorrelation result of the specific frame alignment word sequence in a Y polarization direction, and a graph of an aperiodic cross-correlation result of the specific frame alignment word sequence in the two polarization directions according to another embodiment of this application;

FIG. 17 shows a graph of an aperiodic autocorrelation result of a specific training sequence in an X polarization direction, a graph of an aperiodic autocorrelation result of the specific training sequence in a Y polarization direction, and a graph of an aperiodic cross-correlation result of the specific training sequence in the two polarization directions according to another embodiment of this application;

FIG. 18 shows a graph of a periodic autocorrelation result of a specific pilot sequence in an X polarization direction, a graph of a periodic autocorrelation result of the specific pilot sequence in a Y polarization direction, and a graph of a periodic cross-correlation result of the specific pilot sequence in the two polarization directions according to another embodiment of this application;

FIG. 19 is a spectrum diagram of a super-frame for DP-16QAM when the super-frame structure shown in FIG. 15 is used;

FIG. 20 shows a diagram of a structure of a specific super-frame, a diagram of a structure of the $1^{st}$ sub-frame in the specific super-frame, and a diagram of a structure of another sub-frame other than the $1^{st}$ sub-frame in the specific super-frame according to another embodiment of this application;

FIG. 21 shows a graph of an aperiodic autocorrelation result of a specific training sequence in an X polarization direction, a graph of an aperiodic autocorrelation result of the specific training sequence in a Y polarization direction, and a graph of an aperiodic cross-correlation result of the specific training sequence in the two polarization directions according to another embodiment of this application;

FIG. 22 shows a graph of a periodic autocorrelation result of a specific pilot sequence in an X polarization direction, a graph of a periodic autocorrelation result of the specific pilot sequence in a Y polarization direction, and a graph of a periodic cross-correlation result of the specific pilot sequence in the two polarization directions according to another embodiment of this application;

FIG. 23 is a spectrum diagram of a super-frame for DP-16QAM when the super-frame structure shown in FIG. 20 is used;

FIG. 24 shows a diagram of a structure of a specific super-frame, a diagram of a structure of the 1st sub-frame in the specific super-frame, and a diagram of a structure of another sub-frame other than the 1st sub-frame in the specific super-frame according to another embodiment of this application;

FIG. 25 is a spectrum diagram of a super-frame for DP-16QAM when the super-frame structure shown in FIG. 24 is used;

FIG. 26 shows a diagram of a structure of a specific super-frame, a diagram of a structure of the 1st sub-frame in the specific super-frame, and a diagram of a structure of another sub-frame other than the 1st sub-frame in the specific super-frame according to another embodiment of this application;

FIG. 27 shows a graph of an aperiodic autocorrelation result of a specific training sequence in an X polarization direction, a graph of an aperiodic autocorrelation result of the specific training sequence in a Y polarization direction, and a graph of an aperiodic cross-correlation result of the specific training sequence in the two polarization directions according to another embodiment of this application;

FIG. 28 shows a graph of a periodic autocorrelation result of a specific pilot sequence in an X polarization direction, a graph of a periodic autocorrelation result of the specific pilot sequence in a Y polarization direction, and a graph of a periodic cross-correlation result of the specific pilot sequence in the two polarization directions according to another embodiment of this application;

FIG. 29 is a spectrum diagram of a super-frame for DP-16QAM when the super-frame structure shown in FIG. 26 is used;

FIG. 30 shows a diagram of a structure of a specific super-frame, a diagram of a structure of the 1st sub-frame in the specific super-frame, and a diagram of a structure of another sub-frame other than the 1st sub-frame in the specific super-frame according to another embodiment of this application;

FIG. 31 is a spectrum diagram of a super-frame for DP-16QAM when the super-frame structure shown in FIG. 30 is used;

FIG. 32 is a flowchart of a transmission method for optical communication according to an embodiment of this application;

FIG. 33 shows diagrams of structures of a specific super-frame, the 1st sub-frame in the super-frame, and another sub-frame other than the 1st sub-frame in the super-frame according to an embodiment of this application;

FIG. 34 is a schematic diagram of a pilot symbol generation structure according to an embodiment of this application;

FIG. 35 is a schematic diagram of another pilot symbol generation structure according to an embodiment of this application;

FIG. 36 shows a graph of a periodic autocorrelation result of a specific sequence of pilot symbols in an X polarization direction, a graph of a periodic autocorrelation result of the specific sequence of pilot symbols in a Y polarization direction, and a graph of a periodic cross-correlation result of the specific sequence of pilot symbols in the two polarization directions according to an embodiment of this application;

FIG. 37 is a schematic diagram of another pilot symbol generation structure according to an embodiment of this application;

FIG. 38 shows a graph of a periodic autocorrelation result of a specific sequence of pilot symbols in an X polarization direction, a graph of a periodic autocorrelation result of the specific sequence of pilot symbols in a Y polarization direction, and a graph of a periodic cross-correlation result of the specific sequence of pilot symbols in the two polarization directions according to an embodiment of this application;

FIG. 39 shows diagrams of structures of a specific super-frame, the 1st sub-frame in the super-frame, and another sub-frame other than the 1st sub-frame in the super-frame according to an embodiment of this application;

FIG. 40 is a schematic diagram of another pilot symbol generation structure according to an embodiment of this application;

FIG. 41 shows a graph of a periodic autocorrelation result of a specific sequence of pilot symbols in an X polarization direction, a graph of a periodic autocorrelation result of the specific sequence of pilot symbols in a Y polarization direction, and a graph of a periodic cross-correlation result of the specific sequence of pilot symbols in the two polarization directions according to an embodiment of this application;

FIG. 42 is a flowchart of another transmission method for optical communication according to an embodiment of this application;

FIG. 43 is a schematic diagram of another pilot symbol generation structure according to an embodiment of this application; and

FIG. 44 shows a graph of a periodic autocorrelation result of a specific sequence of pilot symbols in an X polarization direction, a graph of a periodic autocorrelation result of the specific sequence of pilot symbols in a Y polarization direction, and a graph of a periodic cross-correlation result of the specific sequence of pilot symbols in the two polarization directions according to an embodiment of this application.

## DESCRIPTION OF EMBODIMENTS

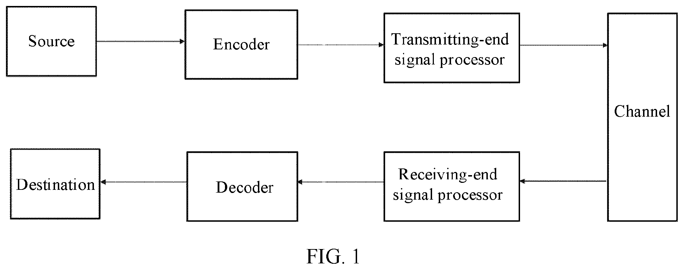

Before embodiments of this application are described in detail, application scenarios of embodiments of this application are described first. FIG. 1 is a block diagram of a structure of a communication system. At a transmitting end, a source provides a data stream to be transmitted. An encoder receives and encodes the data stream. Codeword information that is obtained through encoding and that combines parity bits and information bits is sent to a transmitting-end signal processor for framing, and is transmitted through a channel to a receiver end. After receiving a distorted signal caused by noise or other impairments in the channel, the receiver end sends the signal to a receiverend signal processor for dispersion compensation, alignment, phase recovery, and other operations. Then, a decoder decodes the signal to restore the original data and sends the data to a destination. The encoding method provided in this application is applied to the transmitting-end signal processor shown in FIG. 1, and is a very important part in the communication system.

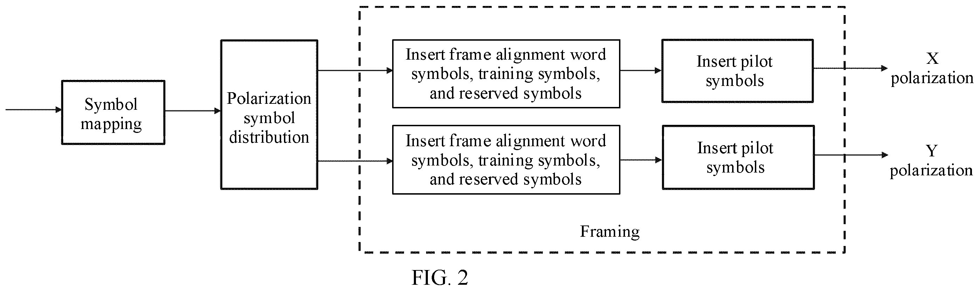

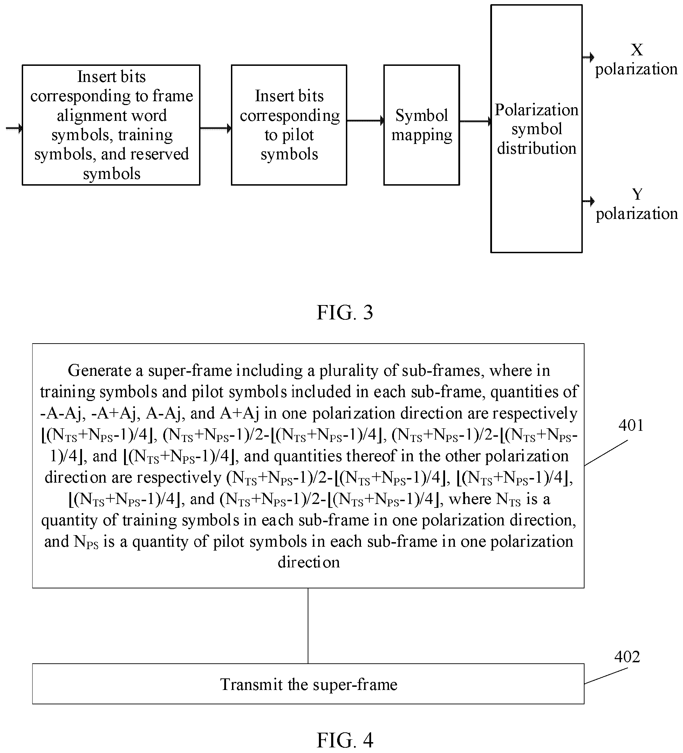

In the transmitting-end signal processor, a framing process may be shown in FIG. 2 or FIG. 3. In a framing method, as shown in FIG. 2, symbol mapping is performed on a received data sequence, including, but not limited to, quadrature phase shift keying (Quadrature Phase Shift Keying, QPSK) and quadrature amplitude modulation (Quadrature Amplitude Modulation, QAM), and then polarization symbol distribution is performed to obtain dual-polarization (Dual-polarization, DP) symbols, for example, DP-QPSK, DP-8QAM, DP-16QAM, DP-32QAM, and DP-64QAM. The following framing is performed on a specific quantity of dual-polarization symbols: inserting frame alignment word symbols, training symbols, reserved symbols, and pilot symbols in each of X and Y polarization directions to obtain a dual-polarization symbol sequence to be transmitted, which is referred to as a superframe (super-frame). It should be noted that, after the symbol mapping, symbols may be further interleaved, and the foregoing framing is performed on the interleaved symbols. In this application, one dual-polarization symbol may be represented by two symbols, one of which is in an X polarization direction, and the other in a Y polarization direction. Each symbol may be represented by a complex number. For example, a symbol modulated using 16QAM may be represented by any one of the following 16 complex numbers: $\pm 1 \pm 1j$, $\pm 1 \pm 3j$, $\pm 3 \pm 1j$, and $\pm 3 \pm 3j$. It should be understood that, in some cases, the real part and the imaginary part may be normalized, but the essence does not change. Further, a sequence having N dual-polarization symbols may be completely represented by two complex sequences having a length of N, where one complex sequence represents symbols on the X polarization, and the other complex sequence represents symbols on the Y polarization. Each complex sequence with a length of N is represented by a real part sequence with a length of N and an imaginary part sequence with a length of N, where N is an integer greater than 1.

Generally, the received data sequence is an information and parity sequence obtained through forward error correction (Forward Error Correction, FEC). The framing operations shown in FIG. 2 are performed on the symbols. As shown in FIG. 3, alternatively, for a received data sequence, according to a used symbol mapping rule, bits corresponding to frame alignment word symbols, training symbols, reserved symbols, and pilot symbols are inserted before symbol mapping, and then the symbol mapping and polarization symbol distribution are performed to obtain the same super-frame as that obtained in the operation in FIG. 2. In this case, before the symbol mapping, interleaving may be further performed on the bit sequence into which the bits corresponding to the symbols are inserted, and then the symbol mapping and polarization symbol distribution are performed to obtain the same super-frame as that obtained in the operation in FIG. 2. It should be understood that another framing method is not excluded, and details are not described in this application.

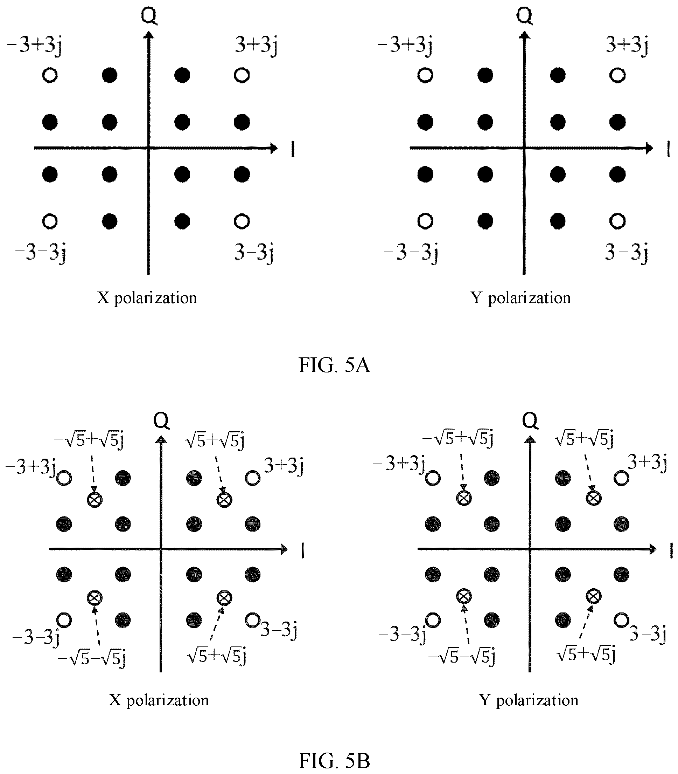

An embodiment of this application provides a transmission method for optical communication. As shown in FIG. 4, the transmission method includes the following steps.

401: Generate a super-frame including a plurality of sub-frames, where one sub-frame includes training symbols and pilot symbols, and each of the training symbols and the pilot symbols is one of -A-Aj, -A+Aj, A-Aj, and A+Aj; in the training symbols and the pilot symbols included in each sub-frame, quantities of -A-Aj, -A+Aj, A-Aj, and A+Aj in one polarization direction are respectively

$\lfloor (N_{TS}+N_{PS}-1)/4 \rfloor$, $(N_{TS}+N_{PS}-1)/2-\lfloor (N_{TS}+N_{PS}-1)/4 \rfloor$, $(N_{TS}+N_{PS}-1)/2-\lfloor (N_{TS}+N_{PS}-1)/4 \rfloor$, and $\lfloor (N_{TS}+N_{PS}-1)/4 \rfloor$, and

quantities thereof in the other polarization direction are respectively

$(N_{TS}+N_{PS}-1)/2-\lfloor (N_{TS}+N_{PS}-1)/4 \rfloor$, $\lfloor (N_{TS}+N_{PS}-1)/4 \rfloor$, $\lfloor (N_{TS}+N_{PS}-1)/4 \rfloor$, and $(N_{TS}+N_{PS}-1)/2-\lfloor (N_{TS}+N_{PS}-1)/4 \rfloor$, where

$N_{TS}$ is a quantity of training symbols in each sub-frame in one polarization direction, $N_{PS}$ is a quantity of pilot symbols in each sub-frame in one polarization direction, $N_{TS}+N_{PS}$ is an odd number, and $\lfloor a \rfloor$ represents rounding down a positive real number a.

402: Transmit the super-frame.

In this embodiment of this application, a value of A is determined by a modulation format used when a symbol is generated. In some actual application scenarios, -A-Aj, -A+Aj, A-Aj, and A+Aj are symbols in a constellation diagram of a used modulation format. For example, if QPSK is used, there are only four symbols, in which case A = $\pm 1$, and each training symbol may be represented by one of -1-1j, -1+1j, 1-1j, and 1+1j. In one sub-frame, training symbols represented by the four complex numbers all exist, and the same is true for pilot symbols. If 16QAM is used, there are 16 symbols, in which case A = $\pm 1$ or $\pm 3$. Generally, both training symbols and pilot symbols are the outermost four symbols in the constellation diagram, as indicated by the hollow symbols in FIG. 5A. In this case, when A = 3 or -3, each training symbol may be represented by one of -3-3j, -3+3j, 3-3j, and 3+3j. In one sub-frame, training symbols represented by the four complex numbers also all exist, and the same is true for pilot symbols. Similarly, if 64QAM is used, A = $\pm 1$, $\pm 3$, $\pm 5$, or $\pm 7$. Generally, in complex numbers representing a training symbol and a pilot symbol, A = $\pm 5$ or $\pm 7$. Assuming that A = 5 or -5, each training symbol may be represented by one of -5-5j, -5+5j, 5-5j, and 5+5j. In one sub-frame, training symbols represented by the four complex numbers all exist. Similarly, the same is true for pilot symbols. Alternatively, a higher-order modulation format may be used, and details are not described in this application. In an actual transmission process, this can result in a relatively low probability of symbol errors, facilitating channel estimation.

It should be noted that, alternatively, symbols in a constellation diagram may be compressed, and the value of A is also compressed accordingly. Taking 16QAM as an example, power normalization is performed on the 16 symbols in the 16QAM constellation diagram, in which case the value is changed to

$$\{\pm \tfrac{1}{\sqrt{10}} \pm \tfrac{1}{\sqrt{10}}j, \ \pm \tfrac{1}{\sqrt{10}} \pm \tfrac{3}{\sqrt{10}}j, \ \pm \tfrac{3}{\sqrt{10}} \pm \tfrac{1}{\sqrt{10}}j, \ \pm \tfrac{3}{\sqrt{10}} \pm \tfrac{3}{\sqrt{10}}j\}$$ , and the value of A is $\tfrac{1}{\sqrt{10}}$ or $\tfrac{3}{\sqrt{10}}$ . Alternatively, another manner of normalization may be used, which is not limited in this application.

It should be understood that, when the pilot symbols and the training symbols, -A-Aj, -A+Aj, A-Aj, and A+Aj, are the outermost four symbols in the constellation diagram, the training symbols and the pilot symbols have a relatively high sensitivity (sensitivity), but have a relatively large peak-to-average power (peak to average power) ratio; and when the values of the pilot symbols and the training symbols, -A-Aj, -A+Aj, A-Aj, and A+Aj, are the innermost four symbols in the constellation diagram, the training symbols and the pilot symbols have relatively small noise (noise), but have a relatively low sensitivity (sensitivity).

It should be noted that, in some actual application scenarios, the pilot symbols and the training symbols, -A-Aj, -A+Aj, A-Aj, and A+Aj, may not be symbols in the constellation diagram of the used modulation format, and may be four symbols in a middle area between the outermost four symbols and the innermost four symbols in the constellation diagram. In this case, the training symbols and the pilot symbols have fair noise and sensitivity, but have a relatively low peak-to-average power ratio. Taking 16QAM as an example, values of the 16 symbols in the 16QAM constellation diagram are $\{\pm 1 \pm 1j, \pm 1 \pm 3j, \pm 3 \pm 1j, \pm 3 \pm 3j\}$, and a value of the real number A meets $1 \le A \le 3$. More specifically, as shown in FIG. 5B, the outermost four symbols in the constellation diagram are 3 + 3j, 3 - 3j, -3 + 3j, and -3 - 3j, and the innermost four symbols in the constellation diagram are 1 + 1j, 1 - 1j, -1 + 1j, and -1 - 1j. The values of the pilot symbols and the training symbols, -A-Aj, -A+Aj, A-Aj, and A+Aj, may be four symbols in the middle area between the outermost four symbols and the innermost four symbols in the 16QAM constellation diagram. A specific value of the real number A may be selected according to an actual application scenario, so that the peak-to-average power ratio, noise, and sensitivity of the training symbols and the pilot symbols have a good compromise. For example, the real number $A = \sqrt{5}$ , and the values of the pilot symbols and the training symbols are $\{-\sqrt{5} - \sqrt{5}j, \ -\sqrt{5} + \sqrt{5}j, \ \sqrt{5} - \sqrt{5}j, \ \sqrt{5} + \sqrt{5}j\}$ . In addition, when the 16 symbols in the 16QAM constellation diagram are subjected to power normalization and have values of

$$\{\pm \tfrac{1}{\sqrt{10}} \pm \tfrac{1}{\sqrt{10}}j, \ \pm \tfrac{1}{\sqrt{10}} \pm \tfrac{3}{\sqrt{10}}j, \ \pm \tfrac{3}{\sqrt{10}} \pm \tfrac{1}{\sqrt{10}}j, \ \pm \tfrac{3}{\sqrt{10}} \pm \tfrac{3}{\sqrt{10}}j\}$$ , the value of the real number A meets $\tfrac{1}{\sqrt{10}} \le A \le \tfrac{3}{\sqrt{10}}$ .

For example, the real number $A = \tfrac{\sqrt{2}}{2}$ , and the values of the pilot symbols and the training symbols are $\{-\tfrac{\sqrt{2}}{2} - \tfrac{\sqrt{2}}{2}j, \ -\tfrac{\sqrt{2}}{2} + \tfrac{\sqrt{2}}{2}j, \ \tfrac{\sqrt{2}}{2} - \tfrac{\sqrt{2}}{2}j, \ \tfrac{\sqrt{2}}{2} + \tfrac{\sqrt{2}}{2}j\}$ .

In addition, the two polarization directions are orthogonal to each other. In other words, when one polarization direction is the X polarization, the other polarization direction is the Y polarization; and when one polarization direction is the Y polarization, the other polarization direction is the X polarization. In this embodiment of this application, in one polarization direction, a sum of quantities of training symbols and pilot symbols included in one sub-frame is $N_{TS}+N_{PS}-1$, which is not less than 5. Because one symbol is both a training symbol and a pilot symbol, the sum of quantities is not $N_{TS}+N_{PS}$, and is one less than the sum of quantities of the two types of symbols.

In one sub-frame, a sequence consisting of training symbols in one polarization direction is different from a sequence consisting of training symbols in the other polarization direction, and a sequence consisting of pilot symbols in one polarization direction is different from a sequence consisting of pilot symbols in the other polarization direction. For example, if a sequence consisting of training symbols in one polarization direction is -A-Aj, -A-Aj, A+Aj, and A-Aj, a sequence consisting of training symbols in the other polarization direction cannot be the same according to the same sequence, and may be -A-Aj, -A-Aj, A+Aj, and A+Aj, that is, one of the symbols is different, so as to avoid the problem that a receiver end cannot distinguish the two polarization directions in actual transmission.

In the solution of this embodiment of this application, in each polarization direction, one sub-frame includes $N_{TS}$ +$N_{PS}$-1 training symbols and pilot symbols in total, that is, a total quantity of -A-Aj, -A+Aj, A-Aj, and A+Aj that represent the training symbols and the pilot symbols is $N_{TS}$+$N_{PS}$-1, and a difference between quantities of the four symbols is not greater than 1. In addition, in one sub-frame, quantities of the four complex numbers (-A-Aj, -A+Aj, A-Aj, and A+Aj) that represent the training symbols and the pilot symbols are the same in the two polarization directions, and are both ($N_{TS}$+$N_{PS}$-1)/2, which effectively ensures that symbol quantity balance. In addition, in each polarization direction, a sum of real parts of the complex numbers corresponding to the training symbols and the pilot symbols in one sub-frame is 0, and a sum of imaginary parts thereof is also 0, so that direct current balance can be achieved, which facilitates quality of a signal restored at the receiver end.

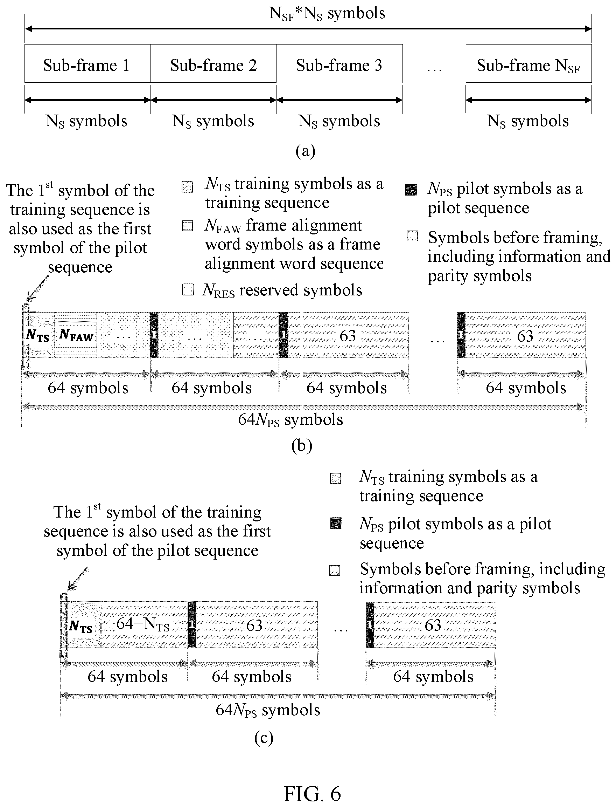

A super-frame (superframe) in this application, which may also be referred to as a multi-frame (multiframe), includes a plurality of sub-frames, and has a structure shown in (a) in FIG. 6. Each sub-frame includes a same quantity of symbols ($N_S$ symbols). There are mainly two types of sub-frames. One type of sub-frame includes frame alignment word symbols, and is usually the 1st sub-frame in the super-frame, but the possibility is not ruled out that the sub-frame is in another position in the super-frame. The other sub-frames are of a second type. A structure of a first-type sub-frame is shown in (b) in FIG. 6. The first $N_{TS}$ symbols in the sub-frame are training symbols, which may be used for link training and/or sub-frame alignment. Generally, the 1st symbol of the sub-frame is both a training symbol and a pilot symbol. Certainly, any one of the first $N_{TS}$ symbols may be both a training symbol and a pilot symbol, which is not limited in this application. In addition, in the first-type sub-frame, a symbol at a fixed position in every 64 symbols or 48 symbols is a pilot symbol, which is used for carrier phase recovery. In (b) in FIG. 6, for example, the 1st symbol in every 64 symbols is a pilot symbol, providing a diagram of a frame structure of the first-type sub-frame. The pilot signal is followed by a plurality of frame alignment word symbols, which are used for alignment between super-frames. The frame alignment word symbols may be used together with the training symbols for alignment between super-frames, or may be used together with the pilot symbols to implement the same function. It should be understood that the frame alignment word symbols are consecutively arranged, and may be adjacent to the training signals, which case is shown in (b) in FIG. 6. Alternatively, there may be a gap of one or more symbols between the frame alignment word signals and the training signals. In addition, after the plurality of frame alignment word symbols, there are usually a plurality of reserved symbols, which may be reserved for other purposes in the future. Alternatively, the reserved symbols may be in one of the plurality of second-type sub-frames, which is not limited in this application. The remaining symbols are symbols before framing that include information and parity bits, where the pilot symbol does not overlap the reserved symbol or the symbol before framing. For example, there is no symbol that is both a pilot symbol and a symbol before framing.

A frame structure of the second-type sub-frame is shown in (c) in FIG. 6. The first $N_{TS}$ symbols in the sub-frame are also training symbols. Generally, the 1st symbol of the sub-frame is both a training symbol and a pilot symbol. Certainly, any one of the first $N_{TS}$ symbols may be both a training symbol and a pilot symbol, which is not limited in this application. Similar to the first-type sub-frame, a symbol at a fixed position in every 64 symbols or 48 symbols is also a pilot symbol, which is used for carrier phase recovery. In (c) in FIG. 6, for example, the 1st symbol in every 64 symbols is a pilot symbol, providing a diagram of a frame structure of the second-type sub-frame. Except the training symbols and the pilot symbols, the other symbols are generally symbols before framing including information and parity bits, where the pilot symbol does not overlap with the symbol before framing.

Further, this application further provides a specific possible quantity of symbols for several different cases. Examples of the several cases are as follows:

(1) A quantity $N_{CW}$ of symbols before framing is 175616. For example, a CFEC encoding scheme in which a staircase (staircase) code and a Hamming code are concatenated is used, or another encoding scheme may be used. The 1st symbol in every 64 symbols is a pilot symbol. In this case, one item in Table 1 indicates the following parameters: a quantity $N_{SF}$ of sub-frames, a quantity $N_{TS}$ of training symbols and a quantity $N_{PS}$ of pilot symbols in each sub-frame, a quantity $N_S$ of symbols in each sub-frame, a quantity $N_F$ of symbols in a super-frame, a super-frame overhead OH, a sum of a quantity $N_{FAW}$ of frame alignment word symbols and a quantity $N_{RES}$ of reserved symbols, and the like, where $N_{FAW}$ is an even number, the corresponding $N_{RES}$ > 0, and OH = ($N_F$ - $N_{CW}$)/$N_{CW}$.

Except the OH, the other parameters are all symbol quantities, which may be understood as a quantity of dual-polarization symbols, or may be understood as a quantity of symbols in one polarization direction. In addition, quantities of different symbols in two polarization directions are the same. For example, there are 10 training symbols in one polarization direction, and there are also 10 training symbols in the other polarization direction. On the whole, there are 10 dual-polarization training symbols. Subsequent tables may all be understood in this way, which is not repeated in this application.

**Table 1**

| Index | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 88 | 32 | 2048 | 180224 | 2.62% | 19 | 208 |
| 2 | 85 | 33 | 2112 | 179520 | 2.22% | 12 | 164 |
| 3 | 80 | 35 | 2240 | 179200 | 2.04% | 10 | 64 |
| 4 | 78 | 36 | 2304 | 179712 | 2.33% | 15 | 196 |
| 5 | 74 | 38 | 2432 | 179968 | 2.48% | 19 | 208 |
| 6 | 72 | 39 | 2496 | 179712 | 2.33% | 16 | 208 |
| 7 | 72 | 39 | 2496 | 179712 | 2.33% | 18 | 64 |
| 8 | 70 | 40 | 2560 | 179200 | 2.04% | 11 | 84 |
| 9 | 70 | 40 | 2560 | 179200 | 2.04% | 9 | 224 |
| 10 | 65 | 43 | 2752 | 178880 | 1.86% | 6 | 144 |
| 11 | 61 | 46 | 2944 | 179584 | 2.26% | 19 | 64 |
| 12 | 61 | 46 | 2944 | 179584 | 2.26% | 17 | 186 |
| 13 | 57 | 49 | 3136 | 178752 | 1.79% | 6 | 58 |
| 14 | 56 | 50 | 3200 | 179200 | 2.04% | 13 | 112 |
| 15 | 56 | 50 | 3200 | 179200 | 2.04% | 11 | 224 |
| 16 | 55 | 51 | 3264 | 179520 | 2.22% | 18 | 164 |
| 17 | 50 | 56 | 3584 | 179200 | 2.04% | 15 | 84 |
| 18 | 50 | 56 | 3584 | 179200 | 2.04% | 13 | 184 |
| 19 | 49 | 57 | 3648 | 178752 | 1.79% | 6 | 98 |
| 20 | 43 | 65 | 4160 | 178880 | 1.86% | 10 | 82 |
| 21 | 40 | 70 | 4480 | 179200 | 2.04% | 19 | 64 |
| 22 | 40 | 70 | 4480 | 179200 | 2.04% | 17 | 144 |
| 23 | 40 | 70 | 4480 | 179200 | 2.04% | 15 | 224 |
| 24 | 35 | 80 | 5120 | 179200 | 2.04% | 19 | 154 |
| 25 | 35 | 80 | 5120 | 179200 | 2.04% | 17 | 224 |

(2) A quantity $N_{CW}$ of symbols before framing is 172032. For example, an open FEC (Open FEC, OFEC) encoding scheme is used, or another encoding scheme may be used. The 1st symbol in every 64 symbols is a pilot symbol. In this case, one item in Table 2 indicates the following parameters: a quantity $N_{SF}$ of sub-frames, a quantity $N_{TS}$ of training symbols and a quantity $N_{PS}$ of pilot symbols in each sub-frame, a quantity $N_S$ of symbols in each sub-frame, a quantity $N_F$ of symbols in a super-frame, a super-frame overhead OH, a sum of a quantity $N_{FAW}$ of frame alignment word symbols and a quantity $N_{RES}$ of reserved symbols, and the like, where $N_{FAW}$ is an even number, the corresponding $N_{RES} > 0$, and OH = $(N_F - N_{CW})/N_{CW}$.

**Table 2**

| Index | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 83 | 33 | 2112 | 175296 | 1.90% | 6 | 110 |
| 2 | 74 | 37 | 2368 | 175232 | 1.86% | 6 | 92 |
| 3 | 67 | 41 | 2624 | 175808 | 2.19% | 14 | 158 |
| 4 | 61 | 45 | 2880 | 175680 | 2.12% | 14 | 110 |
| 5 | 56 | 49 | 3136 | 175616 | 2.08% | 14 | 112 |
| 6 | 56 | 49 | 3136 | 175616 | 2.08% | 12 | 224 |

(continued)

| Index | $N_{SF}$ | $N_{PS}$ | $N_S$ | $N_F$ | OH | $N_{TS}$ | $N_{FAW} + N_{RES}$ |
|---|---|---|---|---|---|---|---|
| 7 | 49 | 56 | 3584 | 175616 | 2.08% | 17 | 56 |
| 8 | 49 | 56 | 3584 | 175616 | 2.08% | 15 | 154 |
| 9 | 48 | 57 | 3648 | 175104 | 1.79% | 6 | 96 |
| 10 | 45 | 61 | 3904 | 175680 | 2.12% | 18 | 138 |
| 11 | 38 | 72 | 4608 | 175104 | 1.79% | 7 | 108 |
| 12 | 37 | 74 | 4736 | 175232 | 1.86% | 11 | 92 |
| 13 | 37 | 74 | 4736 | 175232 | 1.86% | 9 | 166 |
| 14 | 36 | 76 | 4864 | 175104 | 1.79% | 9 | 48 |
| 15 | 33 | 83 | 5312 | 175296 | 1.90% | 14 | 96 |
| 16 | 33 | 83 | 5312 | 175296 | 1.90% | 12 | 162 |
| 17 | 24 | 114 | 7296 | 175104 | 1.79% | 13 | 48 |
| 18 | 24 | 114 | 7296 | 175104 | 1.79% | 11 | 96 |
| 19 | 24 | 114 | 7296 | 175104 | 1.79% | 9 | 144 |
| 20 | 24 | 114 | 7296 | 175104 | 1.79% | 7 | 192 |
| 21 | 23 | 119 | 7616 | 175168 | 1.82% | 16 | 54 |
| 22 | 23 | 119 | 7616 | 175168 | 1.82% | 14 | 100 |
| 23 | 23 | 119 | 7616 | 175168 | 1.82% | 12 | 146 |
| 24 | 23 | 119 | 7616 | 175168 | 1.82% | 10 | 192 |

(3) A quantity $N_{CW}$ of symbols before framing is 175616. For example, a CFEC encoding scheme is used. The 1st symbol in every 48 symbols is a pilot symbol. In this case, one item in Table 3 indicates the following parameters: a quantity $N_{SF}$ of sub-frames, a quantity $N_{TS}$ of training symbols and a quantity $N_{PS}$ of pilot symbols in each sub-frame, a quantity $N_S$ of symbols in each sub-frame, a quantity $N_F$ of symbols in a super-frame, a super-frame overhead OH, a sum of a quantity $N_{FAW}$ of frame alignment word symbols and a quantity $N_{RES}$ of reserved symbols, and the like, where $N_{FAW}$ is an even number, the corresponding $N_{RES} > 0$, and OH = $(N_F - N_{CW})/N_{CW}$.

**Table 3**

| Index | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 121 | 31 | 1488 | 180048 | 2.52% | 6 | 76 |
| 2 | 114 | 33 | 1584 | 180576 | 2.82% | 10 | 172 |
| 3 | 99 | 38 | 1824 | 180576 | 2.82% | 11 | 208 |
| 4 | 94 | 40 | 1920 | 180480 | 2.77% | 11 | 164 |
| 5 | 80 | 47 | 2256 | 180480 | 2.77% | 14 | 64 |
| 6 | 80 | 47 | 2256 | 180480 | 2.77% | 12 | 224 |
| 7 | 75 | 50 | 2400 | 180000 | 2.50% | 7 | 184 |
| 8 | 75 | 50 | 2400 | 180000 | 2.50% | 9 | 34 |
| 9 | 71 | 53 | 2544 | 180624 | 2.85% | 18 | 38 |
| 10 | 71 | 53 | 2544 | 180624 | 2.85% | 16 | 180 |
| 11 | 67 | 56 | 2688 | 180096 | 2.55% | 9 | 192 |
| 12 | 67 | 56 | 2688 | 180096 | 2.55% | 11 | 58 |
| 13 | 66 | 57 | 2736 | 180576 | 2.82% | 16 | 208 |

(continued)

| Index | $N_{SF}$ | $N_{PS}$ | $N_S$ | $N_F$ | OH | $N_{TS}$ | $N_{FAW} + N_{RES}$ |
|---|---|---|---|---|---|---|---|
| 14 | 66 | 57 | 2736 | 180576 | 2.82% | 18 | 76 |
| 15 | 57 | 66 | 3168 | 180576 | 2.82% | 19 | 172 |
| 16 | 56 | 67 | 3216 | 180096 | 2.55% | 10 | 224 |
| 17 | 56 | 67 | 3216 | 180096 | 2.55% | 12 | 112 |
| 18 | 52 | 72 | 3456 | 179712 | 2.33% | 7 | 40 |
| 19 | 50 | 75 | 3600 | 180000 | 2.50% | 12 | 84 |
| 20 | 50 | 75 | 3600 | 180000 | 2.50% | 10 | 184 |
| 21 | 48 | 78 | 3744 | 179712 | 2.33% | 7 | 64 |
| 22 | 39 | 96 | 4608 | 179712 | 2.33% | 9 | 40 |
| 23 | 39 | 96 | 4608 | 179712 | 2.33% | 7 | 118 |
| 24 | 36 | 104 | 4992 | 179712 | 2.33% | 9 | 64 |
| 25 | 36 | 104 | 4992 | 179712 | 2.33% | 7 | 136 |
| 26 | 35 | 107 | 5136 | 179760 | 2.36% | 10 | 84 |
| 27 | 35 | 107 | 5136 | 179760 | 2.36% | 8 | 154 |
| 28 | 35 | 107 | 5136 | 179760 | 2.36% | 6 | 224 |
| 29 | 32 | 117 | 5616 | 179712 | 2.33% | 10 | 64 |
| 30 | 32 | 117 | 5616 | 179712 | 2.33% | 8 | 128 |
| 31 | 32 | 117 | 5616 | 179712 | 2.33% | 6 | 192 |
| 32 | 31 | 121 | 5808 | 180048 | 2.52% | 20 | 92 |
| 33 | 31 | 121 | 5808 | 180048 | 2.52% | 18 | 154 |
| 34 | 31 | 121 | 5808 | 180048 | 2.52% | 16 | 216 |
| 35 | 30 | 125 | 6000 | 180000 | 2.50% | 20 | 64 |
| 36 | 30 | 125 | 6000 | 180000 | 2.50% | 18 | 124 |
| 37 | 30 | 125 | 6000 | 180000 | 2.50% | 16 | 184 |

(4) A quantity $N_{CW}$ of symbols before framing is 172032. For example, an OFEC encoding scheme is used. The 1st symbol in every 48 symbols is a pilot symbol. In this case, one item in Table 4 indicates the following parameters: a quantity $N_{SF}$ of sub-frames, a quantity $N_{TS}$ of training symbols and a quantity $N_{PS}$ of pilot symbols in each sub-frame, a quantity $N_S$ of symbols in each sub-frame, a quantity $N_F$ of symbols in a super-frame, a super-frame overhead OH, a sum of a quantity $N_{FAW}$ of frame alignment word symbols and a quantity $N_{RES}$ of reserved symbols, and the like, where $N_{FAW}$ is an even number, the corresponding $N_{RES} > 0$, and OH = $(N_F - N_{CW})/N_{CW}$.

**Table 4**

| Index | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 119 | 31 | 1488 | 177072 | 2.93% | 12 | 42 |
| 2 | 105 | 35 | 1680 | 176400 | 2.54% | 6 | 168 |
| 3 | 97 | 38 | 1824 | 176928 | 2.85% | 13 | 46 |
| 4 | 92 | 40 | 1920 | 176640 | 2.68% | 9 | 192 |
| 5 | 90 | 41 | 1968 | 177120 | 2.96% | 16 | 48 |
| 6 | 82 | 45 | 2160 | 177120 | 2.96% | 16 | 168 |
| 7 | 80 | 46 | 2208 | 176640 | 2.68% | 11 | 128 |

(continued)

| Index | $N_{SF}$ | $N_{PS}$ | $N_S$ | $N_F$ | OH | $N_{TS}$ | $N_{FAW} + N_{RES}$ |
|---|---|---|---|---|---|---|---|
| 8 | 75 | 49 | 2352 | 176400 | 2.54% | 8 | 168 |
| 9 | 72 | 51 | 2448 | 176256 | 2.46% | 8 | 48 |
| 10 | 72 | 51 | 2448 | 176256 | 2.46% | 6 | 192 |
| 11 | 68 | 54 | 2592 | 176256 | 2.46% | 7 | 144 |
| 12 | 67 | 55 | 2640 | 176880 | 2.82% | 16 | 158 |
| 13 | 55 | 67 | 3216 | 176880 | 2.82% | 20 | 118 |
| 14 | 54 | 68 | 3264 | 176256 | 2.46% | 9 | 120 |
| 15 | 51 | 72 | 3456 | 176256 | 2.46% | 11 | 42 |
| 16 | 51 | 72 | 3456 | 176256 | 2.46% | 9 | 144 |
| 17 | 49 | 75 | 3600 | 176400 | 2.54% | 14 | 56 |
| 18 | 49 | 75 | 3600 | 176400 | 2.54% | 12 | 154 |
| 19 | 46 | 80 | 3840 | 176640 | 2.68% | 19 | 100 |
| 20 | 46 | 80 | 3840 | 176640 | 2.68% | 17 | 192 |
| 21 | 40 | 92 | 4416 | 176640 | 2.68% | 19 | 208 |
| 22 | 39 | 94 | 4512 | 175968 | 2.29% | 7 | 36 |
| 23 | 36 | 102 | 4896 | 176256 | 2.46% | 15 | 48 |
| 24 | 36 | 102 | 4896 | 176256 | 2.46% | 13 | 120 |
| 25 | 36 | 102 | 4896 | 176256 | 2.46% | 11 | 192 |
| 26 | 35 | 105 | 5040 | 176400 | 2.54% | 18 | 98 |
| 27 | 35 | 105 | 5040 | 176400 | 2.54% | 16 | 168 |
| 28 | 34 | 108 | 5184 | 176256 | 2.46% | 15 | 76 |
| 29 | 34 | 108 | 5184 | 176256 | 2.46% | 13 | 144 |
| 30 | 34 | 108 | 5184 | 176256 | 2.46% | 11 | 212 |

Optionally, training symbols are consecutively arranged in a sub-frame. In one polarization direction, in training symbols included in one sub-frame, a quantity of consecutive real-part elements "-A" or "A" is not greater than M0, and a quantity of consecutive imaginary part elements "-A" or "A" is not greater than M0. In addition, a quantity of consecutive same training symbols in one sub-frame does not exceed M1, where both M0 and M1 are positive integers, and $2 \leq M1 \leq M0 \leq 5$. A training sequence obtained in this condition facilitates clock recovery, thereby helping improve quality of a signal restored at the receiver end.

Further, in one polarization direction, in training symbols included in one sub-frame, a quantity of consecutive real part elements "-A" or "A" is not greater than 5, and a quantity of consecutive imaginary part elements "-A" or "A" is not greater than 5. For example, there are six training symbols in one polarization direction. For the sequence -A-Aj, -A-Aj, -A-Aj, -A-Aj, -A-Aj, and A+Aj, the real part elements have five consecutive -A, which meets the requirement of this embodiment. However, if the sequence is -A-Aj, -A-Aj, -A-Aj, -A-Aj, -A-Aj, and -A+Aj, the real part elements have six consecutive -A, which does not meet the requirement of this embodiment. Further, in one polarization direction, a quantity of consecutive same training symbols in one sub-frame does not exceed 4. In this case, the sequence -A-Aj, -A-Aj, -A-Aj, -A-Aj, -A-Aj, and A+Aj that originally meet the requirement no longer meets the requirement of this embodiment because there are five consecutive -A-Aj.

Optionally, when $N_{TS}$ is an even number, that is, in each sub-frame, there are an even number of training symbols in one polarization direction, in the training symbols included in each sub-frame, quantities of -A-Aj, -A+Aj, A-Aj, and A+Aj in one polarization direction are respectively $\lfloor N_{TS}/4 \rfloor$, $N_{TS}/2 - \lfloor N_{TS}/4 \rfloor$, $N_{TS}/2 - \lfloor N_{TS}/4 \rfloor$, and $\lfloor N_{TS}/4 \rfloor$, and quantities thereof in the other polarization direction are respectively $N_{TS}/2 - \lfloor N_{TS}/4 \rfloor$, $\lfloor N_{TS}/4 \rfloor$, $\lfloor N_{TS}/4 \rfloor$, and $N_{TS}/2 - \lfloor N_{TS}/4 \rfloor$. Because $N_{TS} + N_{PS}$ is an odd number, and $N_{TS}$ is an even number, $N_{PS}$ is definitely an odd number, that is, in each sub-frame, there are an odd number of pilot symbols in one polarization direction. In this case, in the pilot symbols included in each sub-frame, except the pilot symbol that is also used as a training symbol, -A-Aj, -A+Aj, A-Aj, and A+Aj may also meet the following condition: Quantities thereof in one polarization direction are respectively $\lfloor(N_{PS}-1)/4\rfloor$, $(N_{PS}-1)/2-\lfloor(N_{PS}-1)/4\rfloor$, $(N_{PS}-1)/2-\lfloor(N_{PS}-1)/4\rfloor$, and $\lfloor(N_{PS}-1)/4\rfloor$, and quantities thereof in the other polarization direction are respectively $(N_{PS}-1)/2-\lfloor(N_{PS}-1)/4\rfloor$, $\lfloor(N_{PS}-1)/4\rfloor$, $\lfloor(N_{PS}-1)/4\rfloor$, and $(N_{PS}-1)/2-\lfloor(N_{PS}-1)/4\rfloor$

When $N_{TS}$ is an odd number, that is, in each sub-frame, there are an odd number of training symbols in one polarization direction, in the training symbols included in each sub-frame, except the training symbol that is also used as a pilot symbol, quantities of -A-Aj, -A+Aj, A-Aj, and A+Aj in one polarization direction are respectively $\lfloor(N_{TS}-1)/4\rfloor$, $(N_{TS}-1)/2-\lfloor(N_{TS}-1)/4\rfloor$, $(N_{TS}-1)/2-\lfloor(N_{TS}-1)/4\rfloor$, and $\lfloor(N_{TS}-1)/4\rfloor$, and quantities thereof in the other polarization direction are respectively $(N_{TS}-1)/2-\lfloor(N_{TS}-1)/4\rfloor$, $\lfloor(N_{TS}-1)/4\rfloor$, $\lfloor(N_{TS}-1)/4\rfloor$, and $(N_{TS}-1)/2-\lfloor(N_{TS}-1)/4\rfloor$. Because $N_{TS}+N_{PS}$ is an odd number, and $N_{TS}$ is an odd number, $N_{PS}$ is definitely an even number, that is, in each sub-frame, there are an even number of pilot symbols in one polarization direction. In this case, in the pilot symbols included in each sub-frame, -A-Aj, -A+Aj, A-Aj, and A+Aj may also meet the following condition: Quantities thereof in one polarization direction are respectively $\lfloor N_{PS}/4\rfloor$, $N_{PS}/2-\lfloor N_{PS}/4\rfloor$, $N_{PS}/2-\lfloor N_{PS}/4\rfloor$, and $\lfloor N_{PS}/4\rfloor$, and quantities thereof in the other polarization direction are respectively $N_{PS}/2-\lfloor N_{PS}/4\rfloor$, $\lfloor N_{PS}/4\rfloor$, $\lfloor N_{PS}/4\rfloor$, and $N_{PS}/2-\lfloor N_{PS}/4\rfloor$

In the solution of the foregoing embodiment, in each polarization direction, quantities of training symbols -A-Aj, -A+Aj, A-Aj, and A+Aj included in one sub-frame are close to each other. In addition, when $N_{TS}$ is an even number, in one sub-frame, quantities of four different symbols (in the form of complex numbers) representing the training symbols in the two polarization directions are the same, quantities of the four symbols are all $N_{TS}/2$, a sum of real parts of the complex numbers corresponding to the training symbols is 0, and a sum of imaginary parts thereof is also 0. When $N_{TS}$ is an odd number, in one sub-frame, except the training symbol that is also used as a pilot symbol, quantities of four different symbols (in the form of complex numbers) representing the training symbols in the two polarization directions are the same, quantities of the four symbols are all $(N_{TS}-1)/2$, a sum of real parts of the complex numbers corresponding to the $N_{TS}-1$ training symbols is 0, and a sum of imaginary parts thereof is also 0. This effectively ensures the balance of the quantity of symbols, and can achieve direct current balance, which facilitates quality of a signal restored at the receiver end. It should be understood that a pilot sequence consisting of the pilot symbols also has a similar effect.

Optionally, in each sub-frame, when a remainder of a quantity $N_{PS}$ of pilot symbols in one polarization direction divided by 4 is 0, in the pilot symbols included in each sub-frame, quantities of -A-Aj, -A+Aj, A-Aj, and A+Aj in one polarization direction are respectively $N_{PS}/4+1$, $N_{PS}/4-1$, $N_{PS}/4-1$, and $N_{PS}/4+1$, and quantities thereof in the other polarization direction are respectively $N_{PS}/4-1$, $N_{PS}/4+1$, $N_{PS}/4+1$, and $N_{PS}/4-1$; or quantities thereof in both polarization directions are $N_{PS}/4$. When a remainder of $N_{PS}$ divided by 4 is 2, in the pilot symbols included in each sub-frame, quantities of -A-Aj, -A+Aj, A-Aj, and A+Aj in one polarization direction are respectively $(N_{PS}-2)/4$, $(N_{PS}-2)/4+1$, $(N_{PS}-2)/4+1$, and $(N_{PS}-2)/4$, and quantities thereof in the other polarization direction are respectively $(N_{PS}-2)/4+1$, $(N_{PS}-2)/4$, $(N_{PS}-2)/4$, and $(N_{PS}-2)/4+1$. When a remainder of $N_{PS}$ divided by 4 is 1, in the pilot symbols included in each sub-frame, except the pilot symbol that is also used as a training symbol, quantities of -A-Aj, -A+Aj, A-Aj, and A+Aj in one polarization direction are respectively $(N_{PS}-1)/4+1$, $(N_{PS}-1)/4-1$, $(N_{PS}-1)/4-1$, and $(N_{PS}-1)/4+1$, and quantities thereof in the other polarization direction are respectively $(N_{PS}-1)/4-1$, $(N_{PS}-1)/4+1$, $(N_{PS}-1)/4+1$, and $(N_{PS}-1)/4-1$; or quantities thereof in both polarization directions are $(N_{PS}-1)/4$. When a remainder of $N_{PS}$ divided by 4 is 3, in the pilot symbols included in each sub-frame, except the pilot symbol that is also used as a training symbol, quantities of -A-Aj, -A+Aj, A-Aj, and A+Aj in one polarization direction are respectively $(N_{PS}-3)/4$, $(N_{PS}-3)/4+1$, $(N_{PS}-3)/4+1$, and $(N_{PS}-3)/4$, and quantities thereof in the other polarization direction are respectively $(N_{PS}-3)/4+1$, $(N_{PS}-3)/4$, $(N_{PS}-3)/4$, and $(N_{PS}-3)/4+1$.

In the foregoing embodiment, a difference between quantities of the pilot symbols -A-Aj, -A+Aj, A-Aj, and A+Aj included in one sub-frame is relatively small, thereby effectively ensuring balance between symbols. In addition, in each polarization direction, except the pilot symbol that is also used as a training symbol (if there are an odd number of pilot symbols), a sum of real parts of the complex numbers corresponding to the other pilot symbols is 0, and a sum of imaginary parts thereof is also 0, so that direct current balance can be achieved, which facilitates quality of a signal restored at the receiver end.

In a plurality of sub-frame structures included in the super-frame, the first-type sub-frame further includes frame alignment word symbols, as shown in (b) in FIG. 6. A plurality of frame alignment word symbols are consecutively arranged in the first-type sub-frame, and each frame alignment word symbol is one of -A-Aj, -A+Aj, A-Aj, and A+Aj, where a value of A corresponding to the frame alignment word symbol is also determined by a modulation format used, which is consistent with the method of determining a value of A corresponding to a training symbol and a pilot symbol described in the foregoing embodiment, and details are not described herein again. It should be understood that, in some application scenarios, each of the frame alignment word symbols is one of -A-Aj, -A+Aj, A-Aj, and A+Aj, and a value of A corresponding to the frame alignment word symbols may be a real number different from that corresponding to the training symbols and the pilot symbols described in the foregoing embodiment. For simplicity of description, the values of A, for example, are equal in this application.

Optionally, in one polarization direction, in the frame alignment word symbols included in the first-type sub-frame, a quantity of consecutive real part elements "-A" or "A" is not greater than M2, and a quantity of consecutive imaginary part elements "-A" or "A" is not greater than M2. In addition, a quantity of consecutive same frame alignment word symbols in the first-type sub-frame does not exceed M3, where both M2 and M3 are positive integers, and $2 \leq M3 \leq M2 \leq 5$. A frame alignment word sequence obtained in this condition facilitates clock recovery, thereby helping improve quality of a signal restored at the receiver end.

Further, in one polarization direction, in frame alignment word symbols included in the first-type sub-frame, a quantity of consecutive real part elements "-A" or "A" is not greater than 5, and a quantity of consecutive imaginary part elements "-A" or "A" is not greater than 5. Optionally, in one polarization direction, a quantity of consecutive same frame alignment word symbols in the first-type sub-frame does not exceed 4. A specific example has been described in the example of the training symbol in the foregoing embodiment, which is not repeated in this application.

In the first-type sub-frame, there are an even number of frame alignment word symbols in one polarization direction, and the following condition may be met: In the frame alignment word symbols included in the first-type sub-frame, quantities of -A-Aj, -A+Aj, A-Aj, and A+Aj in one polarization direction are respectively $\lceil N_{FAW}/4 \rceil$, $N_{FAW}/2-\lceil N_{FAW}/4 \rceil$, $N_{FAW}/2-\lceil N_{FAW}/4 \rceil$, and $\lfloor N_{FAW}/4 \rfloor$, and quantities thereof in the other polarization direction are respectively $N_{FAW}/2-\lceil N_{FAW}/4 \rceil$, $\lceil N_{FAW}/4 \rceil$, $\lceil N_{FAW}/4 \rceil$, and $N_{FAW}/2-\lceil N_{FAW}/4 \rceil$, where $N_{FAW}$ is a quantity of the frame alignment word symbols in the first-type sub-frame in one polarization direction. This condition ensures that the plurality of frame alignment word symbols meet direct current balance, and a difference between quantities of the four available symbols -A-Aj, -A+Aj, A-Aj, and A+Aj is not greater than 1, which facilitates quality of a signal restored at the receiver end.

For example, when $N_{FAW} = 22$, quantities of symbols -A-Aj, -A+Aj, A-Aj, and A+Aj in the X polarization direction are respectively 5, 6, 6, and 5, and quantities of symbols -A-Aj, -A+Aj, A-Aj, and A+Aj in the Y polarization direction are respectively 6, 5, 5, and 6, where the two polarization directions are perpendicular to each other. When $N_{FAW} = 24$, quantities of symbols -A-Aj, -A+Aj, A-Aj, and A+Aj in either polarization direction is 6, and inter-symbol balance and direct current balance can be achieved, which facilitates quality of a signal restored at the receiver end.

Next, this application provides some possible symbol sequences, including a frame alignment word sequence consisting of frame alignment word symbols in a first-type sub-frame, a training sequence consisting of training symbols in each sub-frame, and a pilot sequence consisting of pilot symbols in each sub-frame. Training sequences in different sub-frames are the same, and pilot sequences in different sub-frames are also the same.

First, there may be the following several possible frame alignment word sequences, which can ensure a relatively good cross-correlation between frame alignment word sequences in the two polarization directions, with the overhead being not too large.

(1) Assuming that $N_{FAW} = 20$, the frame alignment word sequence may be any item in Table 5. It should be understood that one index corresponds to a group of frame alignment word sequences in two polarizations, and one item represents the sequences corresponding to one index. In addition, when a polarization 1 for any item in the table is the X polarization, a polarization 2 is the Y polarization; and when the polarization 1 is the Y polarization, the polarization 2 is the X polarization. The same representation manner applies to the subsequent training sequence and pilot sequence tables, and details are not described in this application again.

**Table 5**

| Index | Polarization | Frame alignment word sequence |
|---|---|---|
| 1 | Polarization 1 | A-Aj, A-Aj, A-Aj, -A+Aj, -A+Aj, A+Aj, A-Aj, A+Aj, -A-Aj, A+Aj, A+Aj, -A-Aj, -A+Aj, -A+Aj, A-Aj, -A+Aj, A+Aj, -A-Aj, -A-Aj, -A-Aj |
| | Polarization 2 | A-Aj, A-Aj, A-Aj, -A+Aj, -A+Aj, -A-Aj, A-Aj, -A-Aj, A+Aj, -A-Aj, -A-Aj, A+Aj, -A+Aj, - A+Aj, A-Aj, -A+Aj, -A-Aj, A+Aj, A+Aj, A+Aj |
| 2 | Polarization 1 | A+Aj, A+Aj, A+Aj, -A-Aj, -A-Aj, A-Aj, A+Aj, A-Aj, -A+Aj, A-Aj, A-Aj, -A+Aj, -A-Aj, -A-Aj, A+Aj, -A-Aj, A-Aj, -A+Aj, -A+Aj, -A+Aj |
| | Polarization 2 | -A-Aj, -A-Aj, -A-Aj, A+Aj, A+Aj, A-Aj, -A-Aj, A-Aj, -A+Aj, A-Aj, A-Aj, -A+Aj, A+Aj, A+Aj, -A-Aj, A+Aj, A-Aj, -A+Aj, -A+Aj, -A+Aj |

(continued)

| Index | Polarization | Frame alignment word sequence |
|---|---|---|
| 3 | Polarization 1 | A-Aj, A-Aj, A-Aj, -A+Aj, A+Aj, -A-Aj, A+Aj, A+Aj, A-Aj, -A+Aj, -A+Aj, A-Aj, -A+Aj, -A-Aj, -A+Aj, A+Aj, A+Aj, -A-Aj, -A-Aj, -A-Aj |
|  | Polarization 2 | A-Aj, A-Aj, A-Aj, -A+Aj, -A-Aj, A+Aj, -A-Aj, -A-Aj, A-Aj, -A+Aj, -A+Aj, A-Aj, -A+Aj, A+Aj, -A+Aj, -A-Aj, -A-Aj, A+Aj, A+Aj, A+Aj |
| 4 | Polarization 1 | A+Aj, A+Aj, A+Aj, -A-Aj, A-Aj. -A+Aj, A-Aj, A-Aj, A+Aj, -A-Aj, -A-Aj, A+Aj, -A-Aj, -A+Aj, -A-Aj, A-Aj, A-Aj, -A+Aj, -A+Aj, -A+Aj |
|  | Polarization 2 | -A-Aj, -A-Aj, -A-Aj, A+Aj, A-Aj, -A+Aj, A-Aj, A-Aj, -A-Aj, A+Aj, A+Aj, -A-Aj, A+Aj, -A+Aj, A+Aj, A-Aj, A-Aj, -A+Aj, -A+Aj, -A+Aj |
| 5 | Polarization 1 | -A+Aj, -A+Aj, -A+Aj, A-Aj, A-Aj, A+Aj, -A+Aj, A+Aj, -A-Aj, A+Aj, A+Aj, -A-Aj, A-Aj, A-Aj, -A+Aj, A-Aj, A+Aj, -A-Aj, -A-Aj, -A-Aj |
|  | Polarization 2 | -A+Aj, -A+Aj, -A+Aj, A-Aj, A-Aj, -A-Aj, -A+Aj, -A-Aj, A+Aj, -A-Aj, -A-Aj, A+Aj, A-Aj, A-Aj, -A+Aj, A-Aj, -A-Aj, A+Aj, A+Aj, A+Aj |
| 6 | Polarization 1 | -A-Aj, -A-Aj, -A-Aj, A+Aj, A+Aj, A-Aj, -A-Aj, A-Aj, -A+Aj, A-Aj, A-Aj, -A+Aj, A+Aj, A+Aj, -A-Aj, A+Aj, A-Aj, -A+Aj, -A+Aj, -A+Aj |
|  | Polarization 2 | A+Aj, A+Aj, A+Aj, -A-Aj, -A-Aj, A-Aj, A+Aj, A-Aj, -A+Aj, A-Aj, A-Aj, -A+Aj, -A-Aj, -A-Aj, A+Aj, -A-Aj, A-Aj, -A+Aj, -A+Aj, -A+Aj |
| 7 | Polarization 1 | -A+Aj, -A+Aj, -A+Aj, A-Aj, A+Aj, -A-Aj, A+Aj, A+Aj, -A+Aj, A-Aj, A-Aj, -A+Aj, A-Aj, -A-Aj, A-Aj, A+Aj, A+Aj, -A-Aj, -A-Aj, -A-Aj |
|  | Polarization 2 | -A+Aj, -A+Aj, -A+Aj, A-Aj, -A-Aj, A+Aj, -A-Aj, -A-Aj, -A+Aj, A-Aj, A-Aj, -A+Aj, A-Aj, A+Aj, A-Aj, -A-Aj, -A-Aj, A+Aj, A+Aj, A+Aj |
| 8 | Polarization 1 | -A-Aj, -A-Aj, -A-Aj, A+Aj, A-Aj, -A+Aj, A-Aj, A-Aj, -A-Aj, A+Aj, A+Aj, -A-Aj, A+Aj, -A+Aj, A+Aj, A-Aj, A-Aj, -A+Aj, -A+Aj, -A+Aj |
|  | Polarization 2 | A+Aj, A+Aj, A+Aj, -A-Aj, A-Aj. -A+Aj, A-Aj, A-Aj, A+Aj, -A-Aj, -A-Aj, A+Aj, -A-Aj, -A+Aj, -A-Aj, A-Aj, A-Aj, -A+Aj, -A+Aj, -A+Aj |
| 9 | Polarization 1 | A+Aj, A+Aj, A+Aj, -A-Aj, -A+Aj, A-Aj, -A+Aj, -A+Aj, A+Aj, -A-Aj, -A-Aj, A+Aj, -A-Aj, A-Aj, -A-Aj, -A+Aj, -A+Aj, A-Aj, A-Aj, A-Aj |
|  | Polarization 2 | -A-Aj, -A-Aj, -A-Aj, A+Aj, -A+Aj, A-Aj, -A+Aj, -A+Aj, -A-Aj, A+Aj, A+Aj, -A-Aj, A+Aj, A-Aj, A+Aj, -A+Aj, -A+Aj, A-Aj, A-Aj, A-Aj |
| 10 | Polarization 1 | A-Aj, A-Aj, A-Aj, -A+Aj, -A-Aj, A+Aj, -A-Aj, -A-Aj, A-Aj, -A+Aj, -A+Aj, A-Aj, -A+Aj, A+Aj, -A+Aj, -A-Aj, -A-Aj, A+Aj, A+Aj, A+Aj |
|  | Polarization 2 | A-Aj, A-Aj, A-Aj, -A+Aj, A+Aj, -A-Aj, A+Aj, A+Aj, A-Aj, -A+Aj, -A+Aj, A-Aj, -A+Aj, -A-Aj, -A+Aj, A+Aj, A+Aj, -A-Aj, -A-Aj, -A-Aj |
| 11 | Polarization 1 | A+Aj, A+Aj, A+Aj, -A-Aj, -A-Aj, -A+Aj, A+Aj, -A+Aj, A-Aj, -A+Aj, -A+Aj, A-Aj, -A-Aj, -A-Aj, A+Aj, -A-Aj, -A+Aj, A-Aj, A-Aj, A-Aj |
|  | Polarization 2 | -A-Aj, -A-Aj, -A-Aj, A+Aj, A+Aj, -A+Aj, -A-Aj, -A+Aj, A-Aj, -A+Aj, -A+Aj, A-Aj, A+Aj, A+Aj, -A-Aj, A+Aj, -A+Aj, A-Aj, A-Aj, -A-Aj |
| 12 | Polarization 1 | A-Aj, A-Aj, A-Aj, -A+Aj, -A+Aj, -A-Aj, A-Aj, -A-Aj, A+Aj, -A-Aj, -A-Aj, A+Aj, -A+Aj, - A+Aj, A-Aj, -A+Aj, -A-Aj, A+Aj, A+Aj, A+Aj |
|  | Polarization 2 | A-Aj, A-Aj, A-Aj, -A+Aj, -A+Aj, A+Aj, A-Aj, A+Aj, -A-Aj, A+Aj, A+Aj, -A-Aj, -A+Aj, -A+Aj, A-Aj, -A+Aj, A+Aj, -A-Aj, -A-Aj, -A-Aj |
| 13 | Polarization 1 | -A-Aj, -A-Aj, -A-Aj, A+Aj, -A+Aj, A-Aj, -A+Aj, A+Aj, -A-Aj, A+Aj, A+Aj, -A-Aj, A+Aj, A-Aj, A+Aj, -A+Aj, -A+Aj, A-Aj, A-Aj, A-Aj |
|  | Polarization 2 | A+Aj, A+Aj, A+Aj, -A-Aj, A+Aj, A-Aj, -A+Aj, -A+Aj, A+Aj, -A-Aj, -A-Aj, A+Aj, -A-Aj, A-Aj, -A-Aj, -A+Aj, -A+Aj, A-Aj, A-Aj, A-Aj |

(continued)

| Index | Polarization | Frame alignment word sequence |
|---|---|---|
| 14 | Polarization 1 | -A+Aj, -A+Aj, -A+Aj, A-Aj, -A-Aj, A+Aj, -A-Aj, -A-Aj, -A+Aj, A-Aj, A-Aj, -A+Aj, A-Aj, A+Aj, A-Aj, -A-Aj, -A-Aj, A+Aj, A+Aj, A+Aj |
| | Polarization 2 | -A+Aj, -A+Aj, -A+Aj, A-Aj, A+Aj, -A-Aj, A+Aj, A+Aj, -A+Aj, A-Aj, A-Aj, -A+Aj, A-Aj, -A-Aj, A-Aj, A+Aj, A+Aj, -A-Aj, -A-Aj, -A-Aj |
| 15 | Polarization 1 | -A-Aj, -A-Aj, -A-Aj, A+Aj, A+Aj, -A+Aj, -A-Aj, -A+Aj, A-Aj, -A+Aj, -A+Aj, A-Aj, A+Aj, A+Aj, -A-Aj, A+Aj, -A+Aj, A-Aj, A-Aj, A-Aj |
| | Polarization 2 | A+Aj, A+Aj, A+Aj, -A-Aj, -A-Aj, -A+Aj, A+Aj, -A+Aj, A-Aj, -A+Aj, -A+Aj, A-Aj, -A-Aj, -A-Aj, A+Aj, -A-Aj, -A+Aj, A-Aj, A-Aj, A-Aj |
| 16 | Polarization 1 | -A+Aj, -A+Aj, -A+Aj, A-Aj, A-Aj, -A-Aj, -A+Aj, -A-Aj, A+Aj, -A-Aj, -A-Aj, A+Aj, A-Aj, A-Aj, -A+Aj, A-Aj, -A-Aj, A+Aj, A+Aj, A+Aj |
| | Polarization 2 | -A+Aj, -A+Aj, -A+Aj, A-Aj, A-Aj, A+Aj, -A+Aj, A+Aj, -A-Aj, A+Aj, A+Aj, -A-Aj, A-Aj, A-Aj, -A+Aj, A-Aj, A+Aj, -A-Aj, -A-Aj, -A-Aj |
| 17 | Polarization 1 | -A+Aj, A+Aj, A+Aj, -A+Aj, A-Aj, A-Aj, A+Aj, A-Aj, -A+Aj, -A-Aj, A-Aj, A-Aj, -A+Aj, A+Aj, -A-Aj, A+Aj, -A+Aj, -A-Aj, -A-Aj, -A-Aj |
| | Polarization 2 | -A+Aj, -A-Aj, -A-Aj, -A+Aj, A-Aj, A-Aj, -A-Aj, A-Aj, -A+Aj, A+Aj, A-Aj, A-Aj, -A+Aj, -A-Aj, A+Aj, -A-Aj, -A+Aj, A+Aj, A+Aj, A+Aj |
| 18 | Polarization 1 | -A-Aj, A-Aj, A-Aj, -A-Aj, A+Aj, A+Aj, A-Aj, A+Aj, -A-Aj, -A+Aj, A+Aj, A+Aj, -A-Aj, A-Aj, -A+Aj, A-Aj, -A-Aj, -A+Aj, -A+Aj, -A+Aj |
| | Polarization 2 | A+Aj, A-Aj, A-Aj, A+Aj, -A-Aj, -A-Aj, A-Aj, -A-Aj, A+Aj, -A+Aj, -A-Aj, -A-Aj, A+Aj, A-Aj, -A+Aj, A-Aj, A+Aj, -A+Aj, -A+Aj, -A+Aj |
| 19 | Polarization 1 | A-Aj, A-Aj, A-Aj, -A-Aj, -A+Aj, A-Aj, -A+Aj, -A-Aj, A+Aj, A+Aj, A-Aj, -A-Aj, A+Aj, -A+Aj, A+Aj, A+Aj, -A-Aj, -A+Aj, -A+Aj, -A-Aj |
| | Polarization 2 | A-Aj, A-Aj, A-Aj, A+Aj, -A+Aj, A-Aj, -A+Aj, A+Aj, -A-Aj, -A-Aj, A-Aj, A+Aj, -A-Aj, -A+Aj, -A-Aj, -A-Aj, A+Aj, -A+Aj, -A+Aj, A+Aj |
| 20 | Polarization 1 | A+Aj, A+Aj, A+Aj, -A+Aj, -A-Aj, A+Aj, -A-Aj, -A+Aj, A-Aj, A-Aj, A+Aj, -A+Aj, A-Aj, -A-Aj, A-Aj, A-Aj, -A+Aj, -A-Aj, -A-Aj, -A+Aj |
| | Polarization 2 | -A-Aj, -A-Aj, -A-Aj, -A+Aj, A+Aj, -A-Aj, A+Aj, -A+Aj, A-Aj, A-Aj, -A-Aj, -A+Aj, A-Aj, A+Aj, A-Aj, A-Aj, -A+Aj, A+Aj. A+Aj, -A+Aj |

(2) Assuming that $N_{FAW}$ = 22, the frame alignment word sequence may be any item in Table 6.

**Table 6**

| Index | Polarization | Frame alignment word sequence |
|---|---|---|
| 1 | Polarization 1 | A-Aj, A-Aj, A+Aj, -A+Aj, -A+Aj, A-Aj, A+Aj, A-Aj, -A+Aj, A+Aj, A+Aj, -A-Aj, A+Aj, -A-Aj, A-Aj, -A+Aj, -A-Aj, -A+Aj, A+Aj, -A-Aj, -A-Aj, -A-Aj |
| | Polarization 2 | A+Aj, A+Aj, -A+Aj, A-Aj, -A-Aj, -A-Aj, -A+Aj, A-Aj, A-Aj, -A-Aj, A+Aj, A-Aj, -A+Aj, A-Aj, -A+Aj, -A+Aj, -A-Aj, A+Aj, A-Aj, A+Aj, -A+Aj, -A-Aj |
| 2 | Polarization 1 | A-Aj, A-Aj, A+Aj, -A+Aj, -A+Aj, A-Aj, A+Aj, A-Aj, -A+Aj, A+Aj, A+Aj, -A-Aj, A+Aj, -A-Aj, A-Aj, -A+Aj, -A-Aj, -A+Aj, A+Aj, -A-Aj, -A-Aj, -A-Aj |
| | Polarization 2 | -A-Aj, -A-Aj, A-Aj, -A+Aj, A+Aj, A+Aj, A-Aj, -A+Aj, -A+Aj, A+Aj, -A-Aj, -A+Aj, A-Aj, - A+Aj, A-Aj, A-Aj, A+Aj, -A-Aj, -A+Aj, -A-Aj, A-Aj, A+Aj |
| 3 | Polarization 1 | A+Aj, A+Aj, A-Aj, -A-Aj, -A-Aj, A+Aj, A-Aj, A+Aj, -A-Aj, A-Aj, A-Aj, -A+Aj, A-Aj, - A+Aj, A+Aj, -A-Aj, -A+Aj, -A-Aj, A-Aj, -A+Aj, -A+Aj, -A+Aj |
| | Polarization 2 | A-Aj, A-Aj, -A-Aj, A+Aj, -A+Aj, -A+Aj, -A-Aj, A+Aj, A+Aj, -A+Aj, A-Aj, A+Aj, -A-Aj, A+Aj, -A-Aj, -A-Aj, -A+Aj, A-Aj, A+Aj, A-Aj, -A-Aj, -A+Aj |

(continued)

| Index | Polarization | Frame alignment word sequence |
|---|---|---|
| 4 | Polarization 1 | A+Aj, A+Aj, A-Aj, -A-Aj, -A-Aj, A+Aj, A-Aj, A+Aj, -A-Aj, A-Aj, A-Aj, -A+Aj, A-Aj, - A+Aj, A+Aj, -A-Aj, -A+Aj, -A-Aj, A-Aj, -A+Aj, -A+Aj, -A+Aj |
| | Polarization 2 | -A+Aj, -A+Aj, A+Aj, -A-Aj, A-Aj, A-Aj, A+Aj, -A-Aj, -A-Aj, A-Aj, -A+Aj, -A-Aj, A+Aj, -A-Aj, A+Aj, A+Aj, A-Aj, -A+Aj, -A-Aj, -A+Aj, A+Aj, A-Aj |
| 5 | Polarization 1 | A-Aj, A-Aj, A-Aj, -A+Aj, A+Aj, A-Aj, A+Aj, -A-Aj, A-Aj, -A+Aj, A-Aj, -A+Aj, -A+Aj, A+Aj, -A-Aj, -A+Aj, -A-Aj, A+Aj, A+Aj, -A+Aj, -A-Aj, -A-Aj |
| | Polarization 2 | A-Aj, A+Aj, -A+Aj, -A-Aj, -A+Aj, A-Aj, A+Aj, A+Aj, -A-Aj, A+Aj, -A-Aj, -A+Aj, A-Aj, -A-Aj, -A-Aj, A+Aj, A-Aj, A-Aj, -A-Aj, A+Aj, -A+Aj, -A+Aj |
| 6 | Polarization 1 | A-Aj, A-Aj, A-Aj, -A+Aj, A+Aj, A-Aj, A+Aj, -A-Aj, A-Aj, -A+Aj, A-Aj, -A+Aj, -A+Aj, A+Aj, -A-Aj, -A+Aj, -A-Aj, A+Aj, A+Aj, -A+Aj, -A-Aj, -A-Aj |
| | Polarization 2 | -A+Aj, -A-Aj, A-Aj, A+Aj, A-Aj, -A+Aj, -A-Aj, -A-Aj, A+Aj, -A-Aj, A+Aj, A-Aj, -A+Aj, A+Aj, A+Aj, -A-Aj, -A+Aj, -A+Aj, A+Aj, -A-Aj, A-Aj, A-Aj |
| 7 | Polarization 1 | A+Aj, A+Aj, A+Aj, -A-Aj, A-Aj, A+Aj, A-Aj, -A+Aj, A+Aj, -A-Aj, A+Aj, -A-Aj, -A-Aj, A-Aj, -A+Aj, -A-Aj, -A+Aj, A-Aj, A-Aj, -A-Aj, -A+Aj, -A+Aj |
| | Polarization 2 | A+Aj, A-Aj, -A-Aj, -A+Aj, -A-Aj, A+Aj, A-Aj, A-Aj, -A+Aj, A-Aj, -A+Aj, -A-Aj, A+Aj, - A+Aj, -A+Aj, A-Aj, A+Aj, A+Aj, -A+Aj, A-Aj, -A-Aj, -A-Aj |
| 8 | Polarization 1 | A+Aj, A+Aj, A+Aj, -A-Aj, A-Aj, A+Aj, A-Aj, -A+Aj, A+Aj, -A-Aj, A+Aj, -A-Aj, -A-Aj, A-Aj, -A+Aj, -A-Aj, -A+Aj, A-Aj, A-Aj, -A-Aj, -A+Aj, -A+Aj |
| | Polarization 2 | -A-Aj, -A+Aj, A+Aj, A-Aj, A+Aj, -A-Aj, -A+Aj, -A+Aj, A-Aj, -A+Aj, A-Aj, A+Aj, -A-Aj, A-Aj, A-Aj, -A+Aj, -A-Aj, -A-Aj, A-Aj, -A+Aj, A+Aj, A+Aj |
| 9 | Polarization 1 | A+Aj, A+Aj, A-Aj, -A+Aj, A-Aj, A-Aj, A-Aj, -A-Aj, A+Aj, A+Aj, -A+Aj, A+Aj, A-Aj, -A-Aj, -A+Aj, -A-Aj, -A-Aj, A-Aj, -A+Aj, -A+Aj, -A+Aj, -A-Aj |
| | Polarization 2 | A-Aj, -A-Aj, -A-Aj, A-Aj, A+Aj, A+Aj, A-Aj, -A+Aj, -A-Aj, A+Aj, -A-Aj, -A+Aj, A+Aj, -A-Aj, A-Aj, -A-Aj, A+Aj, -A+Aj, A-Aj, A+Aj, -A+Aj, -A+Aj |
| 10 | Polarization 1 | A+Aj, A+Aj, A-Aj, -A+Aj, A-Aj, A-Aj, A-Aj, -A-Aj, A+Aj, A+Aj, -A+Aj, A+Aj, A-Aj, -A-Aj, -A+Aj, -A-Aj, -A-Aj, A-Aj, -A+Aj, -A+Aj, -A+Aj, -A-Aj |
| | Polarization 2 | -A+Aj, A+Aj, A+Aj, -A+Aj, -A-Aj, -A-Aj, -A+Aj, A-Aj, A+Aj, -A-Aj, A+Aj, A-Aj, -A-Aj, A+Aj, -A+Aj, A+Aj, -A-Aj, A-Aj, -A+Aj, -A-Aj, A-Aj, A-Aj |
| 11 | Polarization 1 | A-Aj, A-Aj, A+Aj, -A-Aj, A+Aj, A+Aj, A+Aj, -A+Aj, A-Aj, A-Aj, -A-Aj, A-Aj, A+Aj, - A+Aj, -A-Aj, -A+Aj, -A+Aj, A+Aj, -A-Aj, -A-Aj, -A-Aj, -A+Aj |
| | Polarization 2 | A+Aj, -A+Aj, -A+Aj, A+Aj, A-Aj, A-Aj, A+Aj, -A-Aj, -A+Aj, A-Aj, -A+Aj, -A-Aj, A-Aj, - A+Aj, A+Aj, -A+Aj, A-Aj, -A-Aj, A+Aj, A-Aj, -A-Aj, -A-Aj |
| 12 | Polarization 1 | A-Aj, A-Aj, A+Aj, -A-Aj, A+Aj, A+Aj, A+Aj, -A+Aj, A-Aj, A-Aj, -A-Aj, A-Aj, A+Aj, - A+Aj, -A-Aj, -A+Aj, -A+Aj, A+Aj, -A-Aj, -A-Aj, -A-Aj, -A+Aj |
| | Polarization 2 | -A-Aj, A-Aj, A-Aj, -A-Aj, -A+Aj, -A+Aj, -A-Aj, A+Aj, A-Aj, -A+Aj, A-Aj, A+Aj, -A+Aj, A-Aj, -A-Aj, A-Aj, -A+Aj, A+Aj, -A-Aj, -A+Aj, A+Aj, A+Aj |

(3) Assuming that $N_{FAW}$ = 24, the frame alignment word sequence may be any item in Table 7.

**Table 7**

| Index | Polarization | Frame alignment word sequence |
|---|---|---|
| 1 | Polarization 1 | -A+Aj, -A+Aj, A-Aj, -A-Aj, -A+Aj, A-Aj, A+Aj, A-Aj, -A-Aj, A-Aj, A+Aj, -A+Aj, A+Aj, -A-Aj, A+Aj, A-Aj, A-Aj, -A-Aj, A+Aj, -A+Aj, -A-Aj, A+Aj, -A+Aj, -A-Aj |
| | Polarization 2 | -A+Aj, -A+Aj, A-Aj, A+Aj, -A+Aj, A-Aj, -A-Aj, A-Aj, A+Aj, A-Aj, -A-Aj, -A+Aj, -A-Aj, A+Aj, -A-Aj, A-Aj, A-Aj, A+Aj, -A-Aj, -A+Aj, A+Aj, -A-Aj, -A+Aj, A+Aj |

(continued)

| Index | Polarization | Frame alignment word sequence |
|---|---|---|
| 2 | Polarization 1 | -A-Aj, -A-Aj, A+Aj, -A+Aj, -A-Aj, A+Aj, A-Aj, A+Aj, -A+Aj, A+Aj, A-Aj, -A-Aj, A-Aj, -A+Aj, A-Aj, A+Aj, A+Aj, -A+Aj, A-Aj, -A-Aj, -A+Aj, A-Aj, -A-Aj, -A+Aj |
| | Polarization 2 | A+Aj, A+Aj, -A-Aj, -A+Aj, A+Aj, -A-Aj, A-Aj, -A-Aj, -A+Aj, -A-Aj, A-Aj, A+Aj, A-Aj, -A+Aj, A-Aj, -A-Aj, -A-Aj, -A+Aj, A-Aj, A+Aj, -A+Aj, A-Aj, A+Aj, -A+Aj |
| 3 | Polarization 1 | -A+Aj, -A-Aj, A-Aj, -A+Aj, -A-Aj, A-Aj, -A+Aj, A+Aj, A+Aj, A-Aj, -A+Aj, A-Aj, -A-Aj, A-Aj, A+Aj, -A+Aj, A+Aj, A-Aj, A+Aj, -A-Aj, -A+Aj, A+Aj, -A-Aj, -A-Aj |
| | Polarization 2 | -A+Aj, A+Aj, A-Aj, -A+Aj, A+Aj, A-Aj, -A+Aj, -A-Aj, -A-Aj, A-Aj, -A+Aj, A-Aj, A+Aj, A-Aj, -A-Aj, -A+Aj, -A-Aj, A-Aj, -A-Aj, A+Aj, -A+Aj, -A-Aj, A+Aj, A+Aj |
| 4 | Polarization 1 | -A-Aj, -A+Aj, A+Aj, -A-Aj, -A+Aj, A+Aj, -A-Aj, A-Aj, A-Aj, A+Aj, -A-Aj, A+Aj, -A+Aj, A+Aj, A-Aj, -A-Aj, A-Aj, A+Aj, A-Aj, -A+Aj, -A-Aj, A-Aj, -A+Aj, -A+Aj |
| | Polarization 2 | A+Aj, -A+Aj, -A-Aj, A+Aj, -A+Aj, -A-Aj, A+Aj, A-Aj, A-Aj, -A-Aj, A+Aj, -A-Aj, -A+Aj, -A-Aj, A-Aj, A+Aj, A-Aj, -A-Aj, A-Aj, -A+Aj, A+Aj, A-Aj, -A+Aj, -A+Aj |
| 5 | Polarization 1 | A-Aj, -A-Aj, -A+Aj, A-Aj, -A-Aj, -A+Aj, A-Aj, A+Aj, A+Aj, -A+Aj, A-Aj, -A+Aj, -A-Aj, -A+Aj, A+Aj, A-Aj, A+Aj, -A+Aj, A+Aj, -A-Aj, A-Aj, A+Aj, -A-Aj, -A-Aj |
| | Polarization 2 | A-Aj, A+Aj, -A+Aj, A-Aj, A+Aj, -A+Aj, A-Aj, -A-Aj, -A-Aj, -A+Aj, A-Aj, -A+Aj, A+Aj, -A+Aj, -A-Aj, A-Aj, -A-Aj, -A+Aj, -A-Aj, A+Aj, A-Aj, -A-Aj, A+Aj, A+Aj |
| 6 | Polarization 1 | A+Aj, -A+Aj, A-Aj, A+Aj, A-Aj, -A-Aj, A-Aj, A-Aj, A+Aj, A+Aj, -A+Aj, -A-Aj, A+Aj, -A-Aj, -A+Aj, -A+Aj, -A+Aj, A-Aj, -A-Aj, A+Aj, A-Aj, -A-Aj, -A+Aj, -A-Aj |
| | Polarization 2 | -A-Aj, -A+Aj, A-Aj, -A-Aj, A-Aj, A+Aj, A-Aj, A-Aj, -A-Aj, -A-Aj, -A+Aj, A+Aj, -A-Aj, A+Aj, -A+Aj, -A+Aj, -A+Aj, A-Aj, A+Aj, -A-Aj, A-Aj, A+Aj, -A+Aj, A+Aj |
| 7 | Polarization 1 | A-Aj, -A-Aj, A+Aj, A-Aj, A+Aj, -A+Aj, A+Aj, A+Aj, A-Aj, A-Aj, -A-Aj, -A+Aj, A-Aj, -A+Aj, -A-Aj, -A-Aj, -A-Aj, A+Aj, -A+Aj, A-Aj, A+Aj, -A+Aj, -A-Aj, -A+Aj |
| | Polarization 2 | A-Aj, A+Aj, -A-Aj, A-Aj, -A-Aj, -A+Aj, -A-Aj, -A-Aj, A-Aj, A-Aj, A+Aj, -A+Aj, A-Aj, -A+Aj, A+Aj, A+Aj, A+Aj, -A-Aj, -A+Aj, A-Aj, -A-Aj, -A+Aj, A+Aj, -A+Aj |
| 8 | Polarization 1 | A+Aj, -A+Aj, A+Aj, A-Aj, -A-Aj, A+Aj, A-Aj, -A+Aj, -A+Aj, -A+Aj, A+Aj, -A-Aj, A+Aj, -A+Aj, -A-Aj, -A-Aj, A-Aj, A-Aj, A+Aj, A-Aj, -A-Aj, A-Aj, -A+Aj, -A-Aj |
| | Polarization 2 | -A-Aj, -A+Aj, -A-Aj, A-Aj, A+Aj, -A-Aj, A-Aj, -A+Aj, -A+Aj, -A+Aj, -A-Aj, A+Aj, -A-Aj, -A+Aj, A+Aj, A+Aj, A-Aj, A-Aj, -A-Aj, A-Aj, A+Aj, A-Aj, -A+Aj, A+Aj |
| 9 | Polarization 1 | A-Aj, -A-Aj, A-Aj, A+Aj, -A+Aj, A-Aj, A+Aj, -A-Aj, -A-Aj, -A-Aj, A-Aj, -A+Aj, A-Aj, -A-Aj, -A+Aj, -A+Aj, A+Aj, A+Aj, A-Aj, A+Aj, -A+Aj, A+Aj, -A-Aj, -A+Aj |
| | Polarization 2 | A-Aj, A+Aj, A-Aj, -A-Aj, -A+Aj, A-Aj, -A-Aj, A+Aj, A+Aj, A+Aj, A-Aj, -A+Aj, A-Aj, A+Aj, -A+Aj, -A+Aj, -A-Aj, -A-Aj, A-Aj, -A-Aj, -A+Aj, -A-Aj, A+Aj, -A+Aj |
| 10 | Polarization 1 | A+Aj, A-Aj, A+Aj, -A+Aj, -A-Aj, A+Aj, -A+Aj, A-Aj, A-Aj, A-Aj, A+Aj, -A-Aj, A+Aj, A-Aj, -A-Aj, - A-Aj, -A+Aj, -A+Aj, A+Aj, -A+Aj, -A-Aj, -A+Aj, A-Aj, -A-Aj |
| | Polarization 2 | -A-Aj, A-Aj, -A-Aj, -A+Aj, A+Aj, -A-Aj, -A+Aj, A-Aj, A-Aj, A-Aj, -A-Aj, A+Aj, -A-Aj, A-Aj, A+Aj, A+Aj, -A+Aj, -A+Aj, -A-Aj, -A+Aj. A+Aj, -A+Aj, A-Aj, A+Aj |
| 11 | Polarization 1 | A+Aj, A-Aj, -A+Aj, A+Aj, -A+Aj, -A-Aj, -A+Aj, -A+Aj, A+Aj, A+Aj, A-Aj, -A-Aj, A+Aj, -A-Aj, A-Aj, A-Aj, A-Aj, -A+Aj, -A-Aj, A+Aj, -A+Aj, -A-Aj, A-Aj, -A-Aj |
| | Polarization 2 | -A-Aj, A-Aj, -A+Aj, -A-Aj, -A+Aj, A+Aj, -A+Aj, -A+Aj, -A-Aj, -A-Aj, A-Aj, A+Aj, -A-Aj, A+Aj, A-Aj, A-Aj, A-Aj, -A+Aj, A+Aj, -A-Aj, -A+Aj, A+Aj, A-Aj, A+Aj |
| 12 | Polarization 1 | -A+Aj, -A-Aj, A+Aj, -A+Aj, A+Aj, A-Aj, A+Aj, A+Aj, -A+Aj, -A+Aj, -A-Aj, A-Aj, -A+Aj, A-Aj, -A-Aj, -A-Aj, -A-Aj, A+Aj, A-Aj, -A+Aj, A+Aj, A-Aj, -A-Aj, A-Aj |
| | Polarization 2 | -A+Aj, A+Aj, -A-Aj, -A+Aj, -A-Aj, A-Aj, -A-Aj, -A-Aj, -A+Aj, -A+Aj, A+Aj, A-Aj, -A+Aj, A-Aj, A+Aj, A+Aj, A+Aj, -A-Aj, A-Aj, -A+Aj, -A-Aj, A-Aj, A+Aj, A-Aj |

(continued)

| Index | Polarization | Frame alignment word sequence |
|---|---|---|
| 13 | Polarization 1 | -A+Aj, -A-Aj, -A+Aj, A+Aj, A-Aj, -A+Aj, A+Aj, -A-Aj, -A-Aj, -A-Aj, -A+Aj, A-Aj, -A+Aj, -A-Aj, A-Aj, A-Aj, A+Aj, A+Aj, -A+Aj, A+Aj, A-Aj, A+Aj, -A-Aj, A-Aj |
| | Polarization 2 | -A+Aj, A+Aj, -A+Aj, -A-Aj, A-Aj, -A+Aj, -A-Aj, A+Aj, A+Aj, A+Aj, -A+Aj, A-Aj, -A+Aj, A+Aj, A-Aj, A-Aj, -A-Aj, -A-Aj, -A+Aj, -A-Aj, A-Aj, -A-Aj, A+Aj, A-Aj |
| 14 | Polarization 1 | A-Aj, A+Aj, A-Aj, -A-Aj, A-Aj, -A+Aj, A+Aj, A+Aj, -A-Aj, A-Aj, A-Aj, -A-Aj, A+Aj, A+Aj, -A-Aj, - A+Aj, -A+Aj, A+Aj, A-Aj, -A+Aj, -A+Aj, -A-Aj, -A+Aj, -A-Aj |
| | Polarization 2 | A-Aj, -A-Aj, A-Aj, A+Aj, A-Aj, -A+Aj, -A-Aj, -A-Aj, A+Aj, A-Aj, A-Aj, A+Aj, -A-Aj, -A-Aj, A+Aj, - A+Aj, -A+Aj, -A-Aj, A-Aj, -A+Aj, -A+Aj, A+Aj, -A+Aj, A+Aj |
| 15 | Polarization 1 | A+Aj, A-Aj, A+Aj, -A+Aj, A+Aj, -A-Aj, A-Aj, A-Aj, -A+Aj, A+Aj, A+Aj, -A+Aj, A-Aj, A-Aj, -A+Aj, -A-Aj, -A-Aj, A-Aj, A+Aj, -A-Aj, -A-Aj, -A+Aj, -A-Aj, -A+Aj |
| | Polarization 2 | -A-Aj, A-Aj, -A-Aj, -A+Aj, -A-Aj, A+Aj, A-Aj, A-Aj, -A+Aj, -A-Aj, -A-Aj, -A+Aj, A-Aj, A-Aj, - A+Aj, A+Aj, A+Aj, A-Aj, -A-Aj, A+Aj, A+Aj, -A+Aj, A+Aj, -A+Aj |
| 16 | Polarization 1 | A+Aj, -A-Aj, A-Aj, A-Aj, A-Aj, -A-Aj, -A+Aj, A+Aj, A+Aj, A-Aj, -A+Aj, -A+Aj, A-Aj, -A+Aj, A+Aj, A+Aj, -A-Aj, A+Aj, A-Aj, -A+Aj, -A+Aj, -A-Aj, -A-Aj, -A-Aj |
| | Polarization 2 | -A-Aj, A+Aj, A-Aj, A-Aj, A-Aj, A+Aj, -A+Aj, -A-Aj, -A-Aj, A-Aj, -A+Aj, -A+Aj, A-Aj, -A+Aj, -A-Aj, -A-Aj, A+Aj, -A-Aj, A-Aj, -A+Aj, -A+Aj, A+Aj, A+Aj, A+Aj |
| 17 | Polarization 1 | A-Aj, -A+Aj, A+Aj, A+Aj, A+Aj, -A+Aj, -A-Aj, A-Aj, A-Aj, A+Aj, -A-Aj, -A-Aj, A+Aj, -A-Aj, A-Aj, A-Aj, -A+Aj, A-Aj, A+Aj, -A-Aj, -A-Aj, -A+Aj, -A+Aj, -A+Aj |
| | Polarization 2 | A-Aj, -A+Aj, -A-Aj, -A-Aj, -A-Aj, -A+Aj, A+Aj, A-Aj, A-Aj, -A-Aj, A+Aj, A+Aj, -A-Aj, A+Aj, A-Aj, A-Aj, -A+Aj, A-Aj, -A-Aj, A+Aj, A+Aj, -A+Aj, -A+Aj, -A+Aj |
| 18 | Polarization 1 | A-Aj, A-Aj, -A+Aj, -A+Aj, A-Aj, -A-Aj, A-Aj, A-Aj, -A-Aj, -A+Aj, -A+Aj, A+Aj, -A-Aj, A+Aj, A+Aj, A-Aj, A+Aj, -A-Aj, A+Aj, A+Aj, -A+Aj, -A-Aj, -A+Aj, -A-Aj |
| | Polarization 2 | A-Aj, A-Aj, -A+Aj, -A+Aj, A-Aj, A+Aj, A-Aj, A-Aj, A+Aj, -A+Aj, -A+Aj, -A-Aj, A+Aj, -A-Aj, -A-Aj, A-Aj, -A-Aj, A+Aj, -A-Aj, -A-Aj, -A+Aj, A+Aj, -A+Aj, A+Aj |
| 19 | Polarization 1 | A+Aj, A+Aj, -A-Aj, -A-Aj, A+Aj, -A+Aj, A+Aj, A+Aj, -A+Aj, -A-Aj, -A-Aj, A-Aj, -A+Aj, A-Aj, A-Aj, A+Aj, A-Aj, -A+Aj, A-Aj, A-Aj, -A-Aj, -A+Aj, -A-Aj, -A+Aj |
| | Polarization 2 | -A-Aj, -A-Aj, A+Aj, A+Aj, -A-Aj, -A+Aj, -A-Aj, -A-Aj, -A+Aj, A+Aj, A+Aj, A-Aj, -A+Aj, A-Aj, A-Aj, -A-Aj, A-Aj, -A+Aj, A-Aj, A-Aj, A+Aj, -A+Aj, A+Aj, -A+Aj |
| 20 | Polarization 1 | -A+Aj, -A+Aj, A-Aj, A+Aj, -A-Aj, -A-Aj, A-Aj, -A+Aj, -A+Aj, A+Aj, -A-Aj, A-Aj, A-Aj, A-Aj, A+Aj, A-Aj, -A-Aj, A+Aj, A+Aj, A+Aj, -A-Aj, -A+Aj, -A+Aj, -A-Aj |
| | Polarization 2 | -A+Aj, -A+Aj, A-Aj, -A-Aj, A+Aj, A+Aj, A-Aj, -A+Aj, -A+Aj, -A-Aj, A+Aj, A-Aj, A-Aj, A-Aj, -A-Aj, A-Aj, A+Aj, -A-Aj, -A-Aj, -A-Aj, A+Aj, -A+Aj, -A+Aj, A+Aj |
| 21 | Polarization 1 | -A-Aj, -A-Aj, A+Aj, A-Aj, -A+Aj, -A+Aj, A+Aj, -A-Aj, -A-Aj, A-Aj, -A+Aj, A+Aj, A+Aj, A+Aj, A-Aj, A+Aj, -A+Aj, A-Aj, A-Aj, A-Aj, -A+Aj, -A-Aj, -A-Aj, -A+Aj |
| | Polarization 2 | A+Aj, A+Aj, -A-Aj, A-Aj, -A+Aj, -A+Aj, -A-Aj, A+Aj, A+Aj, A-Aj, -A+Aj, -A-Aj, -A-Aj, -A-Aj, A-Aj, -A-Aj, -A+Aj, A-Aj, A-Aj, A-Aj, -A+Aj, A+Aj, A+Aj, -A+Aj |

Second, there may be the following several possible pilot sequences, which can ensure a relatively good cross-correlation between pilot sequences in the two polarization directions.

(1) It is assumed that $N_{PS} = 48$. If a remainder of $N_{TS}$ divided by 4 is 1, the pilot sequence is one item in the following Table 8-1. If a remainder of $N_{TS}$ divided by 4 is 3, the pilot sequence is one item in the following Table 8-1 or Table 8-2. It should be understood that $N_{TS}+N_{PS}$ is an odd number; if $N_{PS}$ is an even number, $N_{TS}$ needs to be an odd number, and the remainder of $N_{TS}$ divided by 4 is definitely 1 or 3; and if $N_{PS}$ is an odd number, $N_{TS}$ needs to be an even number, and the remainder of $N_{TS}$ divided by 4 is definitely 0 or 2, which is not repeated later.

**Table 8-1**

| Index | Polarization | Pilot sequence |
|---|---|---|
| 1 | Polarization 1 | -A-Aj, -A+Aj, -A+Aj, A-Aj, -A+Aj, -A+Aj, -A-Aj, -A+Aj, -A+Aj, -A+Aj, A-Aj, A-Aj, A-Aj, A+Aj, A+Aj, A+Aj, A+Aj, -A-Aj, A+Aj, -A-Aj, A-Aj, -A-Aj, A-Aj, -A-Aj, -A+Aj, A+Aj, A-Aj, -A+Aj, -A-Aj, A+Aj, A-Aj, A-Aj, -A-Aj, A+Aj, A+Aj, A-Aj, -A-Aj, A+Aj, -A-Aj, -A+Aj, A+Aj, -A+Aj, A-Aj, A+Aj, -A+Aj, -A-Aj, -A-Aj, A-Aj |
| | Polarization 2 | -A+Aj, -A-Aj, -A-Aj, A+Aj, -A-Aj, -A-Aj, -A+Aj, -A-Aj, -A-Aj, -A-Aj, A+Aj, A+Aj, A+Aj, A-Aj, A-Aj, A-Aj, A-Aj, -A+Aj, A-Aj, -A+Aj, A+Aj, -A+Aj, A+Aj, -A+Aj, -A-Aj, A-Aj, A+Aj, -A-Aj, -A+Aj, A-Aj, A+Aj, A+Aj, - A+Aj, A-Aj, A-Aj, A+Aj, -A+Aj, A-Aj, -A+Aj, -A-Aj, A-Aj, -A-Aj, A+Aj, A-Aj, -A-Aj, -A+Aj, -A+Aj, A+Aj |
| 2 | Polarization 1 | -A-Aj, -A+Aj, -A+Aj, A-Aj, -A+Aj, -A+Aj, -A-Aj, -A+Aj, -A+Aj, -A+Aj, A-Aj, A-Aj, A-Aj, A+Aj, A+Aj, A+Aj, A+Aj, -A-Aj, A+Aj, -A-Aj, A-Aj, -A-Aj, A-Aj, -A-Aj, -A+Aj, A+Aj, A-Aj, -A+Aj, -A-Aj, A+Aj, A-Aj, A-Aj, -A-Aj, A+Aj, A+Aj, A-Aj, -A-Aj, A+Aj, -A-Aj, -A+Aj, A+Aj, -A+Aj, A-Aj, A+Aj, -A+Aj, -A-Aj, -A-Aj, A-Aj |
| | Polarization 2 | A-Aj, A+Aj, A+Aj, -A-Aj, A+Aj, A+Aj, A-Aj, A+Aj, A+Aj, A+Aj, -A-Aj, -A-Aj, -A-Aj, -A+Aj, -A+Aj, -A+Aj, - A+Aj, A-Aj, -A+Aj, A-Aj, -A-Aj, A-Aj, -A-Aj, A-Aj, A+Aj, -A+Aj, -A-Aj, A+Aj, A-Aj, -A+Aj, -A-Aj, -A-Aj, A-Aj, -A+Aj, -A+Aj, -A-Aj, A-Aj, -A+Aj, A-Aj, A+Aj, -A+Aj, A+Aj, -A-Aj, -A+Aj, A+Aj, A-Aj, A-Aj, -A-Aj |
| 3 | Polarization 1 | -A+Aj, -A-Aj, -A-Aj, A+Aj, -A-Aj, -A-Aj, -A+Aj, -A-Aj, -A-Aj, -A-Aj, A+Aj, A+Aj, A+Aj, A-Aj, A-Aj, A-Aj, A-Aj, -A+Aj, A-Aj, -A+Aj, A+Aj, -A+Aj, A+Aj, -A+Aj, -A-Aj, A-Aj, A+Aj, -A-Aj, -A+Aj, A-Aj, A+Aj, A+Aj, - A+Aj, A-Aj, A-Aj, A+Aj, -A+Aj, A-Aj, -A+Aj, -A-Aj, A-Aj, -A-Aj, A+Aj, A-Aj, -A-Aj, -A+Aj, -A+Aj, A+Aj |
| | Polarization 2 | A+Aj, A-Aj, A-Aj, -A+Aj, A-Aj, A-Aj, A+Aj, A-Aj, A-Aj, A-Aj, -A+Aj, -A+Aj, -A+Aj, -A-Aj, -A-Aj, -A-Aj, -A-Aj, A+Aj, -A-Aj, A+Aj, -A+Aj, A+Aj, -A+Aj, A+Aj, A-Aj, -A-Aj, -A+Aj, A-Aj, A+Aj, -A-Aj, -A+Aj, -A+Aj, A+Aj, -A-Aj, -A-Aj, -A+Aj, A+Aj, -A-Aj, A+Aj, A-Aj, -A-Aj, A-Aj, -A+Aj, -A-Aj, A-Aj, A+Aj, A+Aj, -A+Aj |
| 4 | Polarization 1 | A-Aj, A+Aj, A+Aj, -A-Aj, A+Aj, A+Aj, A-Aj, A+Aj, A+Aj, A+Aj, -A-Aj, -A-Aj, -A-Aj, -A+Aj, -A+Aj, -A+Aj, - A+Aj, A-Aj, -A+Aj, A-Aj, -A-Aj, A-Aj, -A-Aj, A-Aj, A+Aj, -A+Aj, -A-Aj, A+Aj, A-Aj, -A+Aj, -A-Aj, -A-Aj, A-Aj, -A+Aj, -A+Aj, -A-Aj, A-Aj, -A+Aj, A-Aj, A+Aj, -A+Aj, A+Aj, -A-Aj, -A+Aj, A+Aj, A-Aj, A-Aj, -A-Aj |
| | Polarization 2 | A+Aj, A-Aj, A-Aj, -A+Aj, A-Aj, A-Aj, A+Aj, A-Aj, A-Aj, A-Aj, -A+Aj, -A+Aj, -A+Aj, -A-Aj, -A-Aj, -A-Aj, -A-Aj, A+Aj, -A-Aj, A+Aj, -A+Aj, A+Aj, -A+Aj, A+Aj, A-Aj, -A-Aj, -A+Aj, A-Aj, A+Aj, -A-Aj, -A+Aj, -A+Aj, A+Aj, -A-Aj, -A-Aj, -A+Aj, A+Aj, -A-Aj, A+Aj, A-Aj, -A-Aj, A-Aj, -A+Aj, -A-Aj, A-Aj, A+Aj, A+Aj, -A+Aj |
| 5 | Polarization 1 | -A-Aj, -A+Aj, -A+Aj, A+Aj, A-Aj, -A-Aj, A+Aj, A-Aj, A+Aj, -A+Aj, A-Aj, -A+Aj, -A-Aj, A-Aj, A-Aj, -A+Aj, - A-Aj, -A-Aj, A-Aj, -A+Aj, A+Aj, -A-Aj, A-Aj, A+Aj, -A+Aj, -A-Aj, -A+Aj, -A-Aj, -A+Aj, A-Aj, -A+Aj, A-Aj, A-Aj, A-Aj, -A-Aj, -A-Aj, -A-Aj, A+Aj, A+Aj, A+Aj, -A+Aj, A+Aj, A+Aj, -A-Aj, A+Aj, A+Aj, -A+Aj |
| | Polarization 2 | -A+Aj, -A-Aj, -A-Aj, A-Aj, A+Aj, -A+Aj, A-Aj, A+Aj, A-Aj, -A-Aj, A+Aj, -A-Aj, -A+Aj, A+Aj, A+Aj, -A-Aj, - A+Aj, -A+Aj, A+Aj, -A-Aj, A-Aj, -A+Aj, A+Aj, A-Aj, -A-Aj, -A+Aj, -A-Aj, -A+Aj, -A-Aj, A+Aj, -A-Aj, A+Aj, A+Aj, A+Aj, A+Aj, -A+Aj, -A+Aj, -A+Aj, A-Aj, A-Aj, A-Aj, -A-Aj, A-Aj, A-Aj, -A+Aj, A-Aj, A-Aj, -A-Aj |
| 6 | Polarization 1 | -A-Aj, -A+Aj, -A+Aj, A+Aj, A-Aj, -A-Aj, A+Aj, A-Aj, A+Aj, -A+Aj, A-Aj, -A+Aj, -A-Aj, A-Aj, A-Aj, -A+Aj, - A-Aj, -A-Aj, A-Aj, -A+Aj, A+Aj, -A-Aj, A-Aj, A+Aj, -A+Aj, -A-Aj, -A+Aj, -A-Aj, -A+Aj, A-Aj, -A+Aj, A-Aj, A-Aj, A-Aj, -A-Aj, -A-Aj, -A-Aj, A+Aj, A+Aj, A+Aj, -A+Aj, A+Aj, A+Aj, -A-Aj, A+Aj, A+Aj, -A+Aj |
| | Polarization 2 | A-Aj, A+Aj, A+Aj, -A+Aj, -A-Aj, A-Aj, -A+Aj, -A-Aj, -A+Aj, A+Aj, -A-Aj, A+Aj, A-Aj, -A-Aj, -A-Aj, A+Aj, A-Aj, A-Aj, -A-Aj, A+Aj, -A+Aj, A-Aj, -A-Aj, -A+Aj, A+Aj, A-Aj, A+Aj, A-Aj, A+Aj, -A-Aj, A+Aj, -A-Aj, -A-Aj, -A-Aj, A-Aj, A-Aj, A-Aj, A-Aj, -A+Aj, -A+Aj, -A+Aj, A+Aj, -A+Aj, -A+Aj, A-Aj, -A+Aj, -A+Aj, A+Aj |

(continued)

| Index | Polarization | Pilot sequence |
|---|---|---|
| 7 | Polarization 1 | -A+Aj, -A-Aj, -A-Aj, A-Aj, A+Aj, -A+Aj, A-Aj, A+Aj, A-Aj, -A-Aj, A+Aj, -A-Aj, -A+Aj, A+Aj, A+Aj, -A-Aj, - A+Aj, -A+Aj, A+Aj, -A-Aj, A-Aj, -A+Aj, A+Aj, A-Aj, -A-Aj, -A+Aj, -A-Aj, -A+Aj, -A-Aj, A+Aj, -A-Aj, A+Aj, A+Aj, A+Aj, A+Aj, -A+Aj, -A+Aj, -A+Aj, A-Aj, A-Aj, A-Aj, -A-Aj, A-Aj, A-Aj, -A+Aj, A-Aj, A-Aj, -A-Aj |
| | Polarization 2 | A+Aj, A-Aj, A-Aj, -A-Aj, -A+Aj, A+Aj, -A-Aj, -A+Aj, -A-Aj, A-Aj, -A+Aj, A-Aj, A+Aj, -A+Aj, -A+Aj, A-Aj, A+Aj, A+Aj, -A+Aj, A-Aj, -A-Aj, A+Aj, -A+Aj, -A-Aj, A-Aj, A+Aj, A-Aj, A+Aj, A-Aj, -A+Aj, A-Aj, -A+Aj, - A+Aj, -A+Aj, -A+Aj, A+Aj, A+Aj, A+Aj, -A-Aj, -A-Aj, -A-Aj, A-Aj, -A-Aj, -A-Aj, A+Aj, -A-Aj, -A-Aj, A-Aj |
| 8 | Polarization 1 | A-Aj, A+Aj, A+Aj, -A+Aj, -A-Aj, A-Aj, -A+Aj, -A-Aj, -A+Aj, A+Aj, -A-Aj, A+Aj, A-Aj, -A-Aj, -A-Aj, A+Aj, A-Aj, A-Aj, -A-Aj, A+Aj, -A+Aj, A-Aj, -A-Aj, -A+Aj, A+Aj, A-Aj, A+Aj, A-Aj, A+Aj, -A-Aj, A+Aj, -A-Aj, -A-Aj, -A-Aj, -A-Aj, A-Aj, A-Aj, A-Aj, -A+Aj, -A+Aj, -A+Aj, A+Aj, -A+Aj, -A+Aj, A-Aj, -A+Aj, -A+Aj, A+Aj |
| | Polarization 2 | A+Aj, A-Aj, A-Aj, -A-Aj, -A+Aj, A+Aj, -A-Aj, -A+Aj, -A-Aj, A-Aj, -A+Aj, A-Aj, A+Aj, -A+Aj, -A+Aj, A-Aj, A+Aj, A+Aj, -A+Aj, A-Aj, -A-Aj, A+Aj, -A+Aj, -A-Aj, A-Aj, A+Aj, A-Aj, A+Aj, A-Aj, -A+Aj, A-Aj, -A+Aj, - A+Aj, -A+Aj, -A+Aj, A+Aj, A+Aj, A+Aj, -A-Aj, -A-Aj, -A-Aj, A-Aj, -A-Aj, -A-Aj, A+Aj, -A-Aj, -A-Aj, A-Aj |
| 9 | Polarization 1 | A-Aj, -A-Aj, -A+Aj, A-Aj, -A-Aj, A+Aj, A-Aj, A+Aj, -A+Aj, A+Aj, -A+Aj, -A+Aj, A+Aj, -A+Aj, A-Aj, -A+Aj, -A+Aj, -A+Aj, A-Aj, A+Aj, A+Aj, A+Aj, -A-Aj, -A-Aj, -A+Aj, A-Aj, A+Aj, -A+Aj, A-Aj, -A-Aj, A-Aj, -A+Aj, A+Aj, -A-Aj, -A-Aj, A-Aj, -A-Aj, A+Aj, A-Aj, -A+Aj, A-Aj, -A-Aj, -A-Aj, -A-Aj, A+Aj, A-Aj, -A-Aj, A+Aj |
| | Polarization 2 | A+Aj, -A+Aj, A+Aj, -A-Aj, A-Aj, A+Aj, -A-Aj, -A+Aj, A-Aj, -A-Aj, -A+Aj, A+Aj, -A-Aj, -A-Aj, A-Aj, -A+Aj, A-Aj, -A+Aj, A+Aj, -A-Aj, A-Aj, -A+Aj, A+Aj, A-Aj, A+Aj, -A+Aj, -A+Aj, A-Aj, A-Aj, A-Aj, -A-Aj, A-Aj, A-Aj, A+Aj, A+Aj, -A-Aj, -A-Aj, A+Aj, -A+Aj, -A-Aj, -A-Aj, A+Aj, -A-Aj, -A+Aj, A+Aj, -A+Aj, A-Aj, A+Aj |
| 10 | Polarization 1 | A+Aj, -A-Aj, -A+Aj, A+Aj, -A-Aj, -A-Aj, -A-Aj, -A+Aj, A-Aj, -A+Aj, A+Aj, -A-Aj, -A+Aj, -A-Aj, -A-Aj, A+Aj, A-Aj, -A+Aj, -A-Aj, -A+Aj, A-Aj, A+Aj, -A+Aj, A-Aj, -A-Aj, -A-Aj, A+Aj, A+Aj, A+Aj, -A+Aj, A-Aj, A-Aj, A-Aj, -A+Aj, A-Aj, A+Aj, A-Aj, A-Aj, A+Aj, A-Aj, A+Aj, -A+Aj, A+Aj, -A-Aj, -A+Aj, A-Aj, -A-Aj, - A+Aj |
| | Polarization 2 | A+Aj, -A+Aj, A-Aj, A+Aj, A-Aj, -A-Aj, A+Aj, -A-Aj, -A-Aj, A-Aj, A+Aj, -A-Aj, -A-Aj, A+Aj, A+Aj, -A+Aj, - A+Aj, -A-Aj, -A+Aj, -A+Aj, -A+Aj, A-Aj, A-Aj, A+Aj, -A+Aj, A+Aj, A-Aj, -A+Aj, -A-Aj, A+Aj, A-Aj, -A+Aj, A-Aj, -A+Aj, -A-Aj, -A-Aj, A-Aj, A-Aj, -A-Aj, -A+Aj, A-Aj, -A-Aj, A+Aj, -A+Aj, -A-Aj, A+Aj, A-Aj, A+Aj |
| 11 | Polarization 1 | -A-Aj, A+Aj, A-Aj, -A+Aj, -A-Aj, A-Aj, A-Aj, -A+Aj, -A+Aj, A-Aj, A+Aj, A+Aj, -A+Aj, A+Aj, -A+Aj, A-Aj, - A-Aj, A+Aj, -A-Aj, A+Aj, -A+Aj, -A-Aj, A-Aj, A-Aj, A-Aj, A+Aj, A-Aj, A+Aj, A+Aj, A+Aj, A-Aj, -A+Aj, A-Aj, -A-Aj, -A-Aj, -A+Aj, -A+Aj, -A+Aj, -A-Aj, -A-Aj, -A+Aj, A+Aj, A+Aj, A-Aj, -A-Aj, -A+Aj, -A-Aj, -A-Aj |
| | Polarization 2 | A+Aj, -A-Aj, -A+Aj, -A-Aj, -A-Aj, A-Aj, A-Aj, -A+Aj, A-Aj, -A-Aj, A+Aj, A+Aj, -A+Aj, -A+Aj, -A-Aj, A-Aj, - A-Aj, A+Aj, A+Aj, A-Aj, A+Aj, -A-Aj, A-Aj, -A-Aj, -A+Aj, A-Aj, A-Aj, A+Aj, -A-Aj, -A+Aj, -A+Aj, A+Aj, A-Aj, A-Aj, -A+Aj, A+Aj, -A-Aj, -A+Aj, A+Aj, -A+Aj, -A-Aj, A-Aj, -A+Aj, -A-Aj, A+Aj, A-Aj, A+Aj, -A+Aj |
| 12 | Polarization 1 | -A-Aj, -A-Aj, A-Aj, -A-Aj, -A+Aj, A+Aj, A+Aj, A-Aj, -A-Aj, -A-Aj, A-Aj, A-Aj, A-Aj, -A-Aj, -A-Aj, -A+Aj, A-Aj, -A+Aj, A+Aj, A+Aj, A+Aj, -A+Aj, A+Aj, -A+Aj, -A+Aj, -A+Aj, -A-Aj, A-Aj, A+Aj, -A-Aj, A+Aj, -A-Aj, - A+Aj, A-Aj, A+Aj, A-Aj, A+Aj, A+Aj, -A+Aj, A-Aj, A-Aj, -A+Aj, -A+Aj, -A-Aj, A-Aj, -A+Aj, A+Aj, -A-Aj |
| | Polarization 2 | A-Aj, A-Aj, -A-Aj, A+Aj, -A+Aj, -A+Aj, A-Aj, -A-Aj, -A+Aj, -A-Aj, A+Aj, -A+Aj, A+Aj, A+Aj, -A-Aj, -A+Aj, -A-Aj, A-Aj, A-Aj, A+Aj, A+Aj, -A-Aj, -A+Aj, A-Aj, -A+Aj, -A+Aj, -A-Aj, -A-Aj, A-Aj, -A-Aj, A+Aj, -A-Aj, - A-Aj, -A+Aj, A+Aj, A-Aj, A+Aj, A+Aj, A+Aj, -A+Aj, -A+Aj, A-Aj, A-Aj, A-Aj, A+Aj, -A-Aj, A-Aj, -A+Aj |

**Table 8-2**

| Index | Polarization | Pilot sequence |
|---|---|---|
| 1 | Polarization 1 | -A-Aj, A-Aj, A-Aj, -A+Aj, -A+Aj, -A+Aj, -A+Aj, A-Aj, -A-Aj, -A+Aj, -A-Aj, -A-Aj, -A-Aj, -A+Aj, -A+Aj, A+Aj, -A-Aj, A+Aj, A+Aj, A+Aj, -A-Aj, -A+Aj, A-Aj, A-Aj, A+Aj, A+Aj, A-Aj, A+Aj, -A+Aj, -A-Aj, -A-Aj, A+Aj, A+Aj, -A-Aj, A-Aj, -A-Aj, A+Aj, A-Aj, A+Aj, A-Aj, A-Aj, -A+Aj, A-Aj, A+Aj, -A-Aj, A+Aj, -A-Aj, - A+Aj |
| | Polarization 2 | -A+Aj, A+Aj, A+Aj, -A-Aj, -A-Aj, -A-Aj, -A-Aj, A+Aj, -A+Aj, -A-Aj, -A+Aj, -A+Aj, -A+Aj, -A-Aj, -A-Aj, A-Aj, -A+Aj, A-Aj, A-Aj, A-Aj, -A+Aj, -A-Aj, A+Aj, A+Aj, A-Aj, A-Aj, A+Aj, A-Aj, -A-Aj, -A+Aj, -A+Aj, A-Aj, A-Aj, -A+Aj, A+Aj, -A+Aj, A-Aj, A+Aj, A-Aj, A+Aj, A+Aj, -A-Aj, A+Aj, A-Aj, -A+Aj, A-Aj, -A+Aj, -A-Aj |
| 2 | Polarization 1 | -A-Aj, A-Aj, A-Aj, -A+Aj, -A+Aj, -A+Aj, -A+Aj, A-Aj, -A-Aj, -A+Aj, -A-Aj, -A-Aj, -A-Aj, -A+Aj, -A+Aj, A+Aj, -A-Aj, A+Aj, A+Aj, A+Aj, -A-Aj, -A+Aj, A-Aj, A-Aj, A+Aj, A+Aj, A-Aj, A+Aj, -A+Aj, -A-Aj, -A-Aj, A+Aj, A+Aj, -A-Aj, A-Aj, -A-Aj, A+Aj, A-Aj, A+Aj, A-Aj, A-Aj, -A+Aj, A-Aj, A+Aj, -A-Aj, A+Aj, -A-Aj, - A+Aj |
| | Polarization 2 | A-Aj, -A-Aj, -A-Aj, A+Aj, A+Aj, A+Aj, A+Aj, -A-Aj, A-Aj, A+Aj, A-Aj, A-Aj, A-Aj, A+Aj, A+Aj, -A+Aj, A-Aj, -A+Aj, -A+Aj, -A+Aj, A-Aj, A+Aj, -A-Aj, -A-Aj, -A+Aj, -A+Aj, -A-Aj, -A+Aj, A+Aj, A-Aj, A-Aj, -A+Aj, - A+Aj, A-Aj, -A-Aj, A-Aj, -A+Aj, -A-Aj, -A+Aj, -A-Aj, -A-Aj, A+Aj, -A-Aj, -A+Aj, A-Aj, -A+Aj, A-Aj, A+Aj |
| 3 | Polarization 1 | A+Aj, -A+Aj, -A+Aj, A-Aj, A-Aj, A-Aj, A-Aj, -A+Aj, A+Aj, A-Aj, A+Aj, A+Aj, A+Aj, A-Aj, A-Aj, -A-Aj, A+Aj, -A-Aj, -A-Aj, -A-Aj, A+Aj, A-Aj, -A+Aj, -A+Aj, -A-Aj, -A-Aj, -A+Aj, -A-Aj, A-Aj, A+Aj, A+Aj, -A-Aj, -A-Aj, A+Aj, -A+Aj, A+Aj, -A-Aj, -A+Aj, -A-Aj, -A+Aj, -A+Aj, A-Aj, -A+Aj, -A-Aj, A+Aj, -A-Aj, A+Aj, A-Aj |
| | Polarization 2 | -A+Aj, A+Aj, A+Aj, -A-Aj, -A-Aj, -A-Aj, -A-Aj, A+Aj, -A+Aj, -A-Aj, -A+Aj, -A+Aj, -A+Aj, -A-Aj, -A-Aj, A-Aj, -A+Aj, A-Aj, A-Aj, A-Aj, -A+Aj, -A-Aj, A+Aj, A+Aj, A-Aj, A-Aj, A+Aj, A-Aj, -A-Aj, -A+Aj, -A+Aj, A-Aj, A-Aj, -A+Aj, A+Aj, -A+Aj, A-Aj, A+Aj, A-Aj, A+Aj, A+Aj, -A-Aj, A+Aj, A-Aj, -A+Aj, A-Aj, -A+Aj, -A-Aj |
| 4 | Polarization 1 | A+Aj, -A+Aj, -A+Aj, A-Aj, A-Aj, A-Aj, A-Aj, -A+Aj, A+Aj, A-Aj, A+Aj, A+Aj, A+Aj, A-Aj, A-Aj, -A-Aj, A+Aj, -A-Aj, -A-Aj, -A-Aj, A+Aj, A-Aj, -A+Aj, -A+Aj, -A-Aj, -A-Aj, -A+Aj, -A-Aj, A-Aj, A+Aj, A+Aj, -A-Aj, -A-Aj, A+Aj, -A+Aj, A+Aj, -A-Aj, -A+Aj, -A-Aj, -A+Aj, -A+Aj, A-Aj, -A+Aj, -A-Aj, A+Aj, -A-Aj, A+Aj, A-Aj |
| | Polarization 2 | A-Aj, -A-Aj, -A-Aj, A+Aj, A+Aj, A+Aj, A+Aj, -A-Aj, A-Aj, A+Aj, A-Aj, A-Aj, A-Aj, A+Aj, A+Aj, -A+Aj, A-Aj, -A+Aj, -A+Aj, -A+Aj, A-Aj, A+Aj, -A-Aj, -A-Aj, -A+Aj, -A+Aj, -A-Aj, -A+Aj, A+Aj, A-Aj, A-Aj, -A+Aj, - A+Aj, A-Aj, -A-Aj, A-Aj, -A+Aj, -A-Aj, -A+Aj, -A-Aj, -A-Aj, A+Aj, -A-Aj, -A+Aj, A-Aj, -A+Aj, A-Aj, A+Aj |
| 5 | Polarization 1 | -A+Aj, A+Aj, -A-Aj, A+Aj, -A-Aj, A-Aj, -A+Aj, A-Aj, A-Aj, -A-Aj, A-Aj, -A-Aj, A+Aj, A-Aj, A+Aj, -A-Aj, -A-Aj, A+Aj, A+Aj, -A+Aj, -A-Aj, A-Aj, -A-Aj, -A-Aj, A-Aj, A-Aj, -A+Aj, A+Aj, -A-Aj, -A-Aj, -A-Aj, A+Aj, -A-Aj, -A+Aj, -A+Aj, A+Aj, A+Aj, A+Aj, -A+Aj, A+Aj, A-Aj, -A+Aj, -A+Aj, -A+Aj, -A+Aj, A-Aj, A-Aj, A+Aj |
| | Polarization 2 | -A-Aj, A-Aj, -A+Aj, A-Aj, -A+Aj, A+Aj, -A-Aj, A+Aj, A+Aj, -A+Aj, A+Aj, -A+Aj, A-Aj, A+Aj, A-Aj, -A+Aj, -A+Aj, A-Aj, A-Aj, -A-Aj, -A+Aj, A+Aj, -A+Aj, -A+Aj, A+Aj, A+Aj, -A-Aj, A-Aj, -A+Aj, -A+Aj, -A+Aj, A-Aj, -A+Aj, -A-Aj, -A-Aj, A-Aj, A-Aj, A-Aj, -A-Aj, A-Aj, A+Aj, -A-Aj, -A-Aj, -A-Aj, A+Aj, A+Aj, A-Aj |
| 6 | Polarization 1 | -A+Aj, A+Aj, -A-Aj, A+Aj, -A-Aj, A-Aj, -A+Aj, A-Aj, A-Aj, -A-Aj, A-Aj, -A-Aj, A+Aj, A-Aj, A+Aj, -A-Aj, -A-Aj, A+Aj, A+Aj, -A+Aj, -A-Aj, A-Aj, -A-Aj, -A-Aj, A-Aj, A-Aj, -A+Aj, A+Aj, -A-Aj, -A-Aj, A+Aj, -A-Aj, -A+Aj, -A+Aj, A+Aj, A+Aj, A+Aj, -A+Aj, A+Aj, A-Aj, -A+Aj, -A+Aj, -A+Aj, -A+Aj, A-Aj, A-Aj, A+Aj |
| | Polarization 2 | A+Aj, -A+Aj, A-Aj, -A+Aj, A-Aj, -A-Aj, A+Aj, -A-Aj, -A-Aj, A-Aj, -A-Aj, A-Aj, -A+Aj, -A-Aj, -A+Aj, A-Aj, A-Aj, -A+Aj, -A+Aj, A+Aj, A-Aj, -A-Aj, A-Aj, A-Aj, -A-Aj, -A-Aj, A+Aj, -A+Aj, A-Aj, A-Aj, A-Aj, -A+Aj, A-Aj, A+Aj, A+Aj, -A+Aj, -A+Aj, -A+Aj, A+Aj, -A+Aj, -A-Aj, A+Aj, A+Aj, A+Aj, A+Aj, -A-Aj, -A-Aj, -A+Aj |

(continued)

| Index | Polarization | Pilot sequence |
|---|---|---|
| 7 | Polarization 1 | A-Aj, -A-Aj, A+Aj, -A-Aj, A+Aj, -A+Aj, A-Aj, -A+Aj, -A+Aj, A+Aj, -A+Aj, A+Aj, -A-Aj, -A+Aj, -A-Aj, A+Aj, A+Aj, -A-Aj, -A-Aj, A-Aj, A+Aj, -A+Aj, A+Aj, A+Aj, -A+Aj, -A+Aj, A-Aj, -A-Aj, A+Aj, A+Aj, A+Aj, -A-Aj, A+Aj, A-Aj, A-Aj, -A-Aj, -A-Aj, -A-Aj, A-Aj, -A-Aj, -A+Aj, A-Aj, A-Aj, A-Aj, A-Aj, -A+Aj, -A+Aj, -A-Aj |
| | Polarization 2 | -A-Aj, A-Aj, -A+Aj, A-Aj, -A+Aj, A+Aj, -A-Aj, A+Aj, A+Aj, -A+Aj, A+Aj, -A+Aj, -A-Aj, A+Aj, A-Aj, -A+Aj, - A+Aj, A-Aj, A-Aj, -A-Aj, -A+Aj, A+Aj, -A+Aj, -A+Aj, A+Aj, A+Aj, -A-Aj, A-Aj, -A+Aj, -A+Aj, -A+Aj, A-Aj, -A+Aj, -A-Aj, -A-Aj, A-Aj, A-Aj, A-Aj, -A-Aj, A-Aj, A+Aj, -A-Aj, -A-Aj, -A-Aj, -A-Aj, A+Aj, A+Aj, A-Aj |
| 8 | Polarization 1 | A-Aj, -A-Aj, A+Aj, -A-Aj, A+Aj, -A+Aj, A-Aj, -A+Aj, -A+Aj, A+Aj, -A+Aj, A+Aj, -A-Aj, -A+Aj, -A-Aj, A+Aj, A+Aj, -A-Aj, -A-Aj, A-Aj, A+Aj, -A+Aj, A+Aj, A+Aj, -A+Aj, -A+Aj, A-Aj, -A-Aj, A+Aj, A+Aj, A+Aj, -A-Aj, A+Aj, A-Aj, A-Aj, -A-Aj, -A-Aj, -A-Aj, A-Aj, -A-Aj, -A+Aj, A-Aj, A-Aj, A-Aj, A-Aj, -A+Aj, -A+Aj, -A-Aj |
| | Polarization 2 | A+Aj, -A+Aj, A-Aj, -A+Aj, A-Aj, -A-Aj, A+Aj, -A-Aj, -A-Aj, A-Aj, -A-Aj, A-Aj, -A+Aj, -A-Aj, -A+Aj, A-Aj, A-Aj, -A+Aj, -A+Aj, A+Aj, A-Aj, -A-Aj, A-Aj, A-Aj, -A-Aj, -A-Aj, A+Aj, -A+Aj, A-Aj, A-Aj, A-Aj, -A+Aj, A-Aj, A+Aj, A+Aj, -A+Aj, -A+Aj, -A+Aj, A+Aj, -A+Aj, -A-Aj, A+Aj, A+Aj, A+Aj, A+Aj, -A-Aj, -A-Aj, -A+Aj |
| 9 | Polarization 1 | -A+Aj, A+Aj, A+Aj, A+Aj, A+Aj, A-Aj, A-Aj, -A-Aj, -A+Aj, -A+Aj, A-Aj, -A-Aj, A+Aj, A+Aj, A-Aj, A+Aj, - A+Aj, -A-Aj, -A-Aj, A+Aj, -A-Aj, -A-Aj, -A-Aj, -A-Aj, A-Aj, -A+Aj, -A-Aj, A-Aj, -A+Aj, A+Aj, -A+Aj, A-Aj, - A-Aj, A-Aj, A+Aj, -A-Aj, A-Aj, -A+Aj, A+Aj, A-Aj, -A-Aj, -A-Aj, -A+Aj, -A+Aj, A-Aj, A+Aj, -A+Aj, A+Aj |
| | Polarization 2 | -A+Aj, A-Aj, A-Aj, A-Aj, -A-Aj, A-Aj, A-Aj, -A+Aj, A+Aj, -A-Aj, A-Aj, A-Aj, A+Aj, A+Aj, A+Aj, -A-Aj, A-Aj, A+Aj, A+Aj, -A+Aj, A-Aj, -A-Aj, -A+Aj, -A+Aj, -A-Aj, -A+Aj, A+Aj, -A+Aj, A+Aj, -A-Aj, -A-Aj, A-Aj, -A-Aj, -A+Aj, A+Aj, -A-Aj, A-Aj, -A+Aj, -A+Aj, A+Aj, -A-Aj, A-Aj, -A-Aj, A-Aj, A+Aj, -A+Aj, -A+Aj, -A+Aj |
| 10 | Polarization 1 | -A+Aj, A+Aj, A+Aj, A+Aj, A+Aj, A-Aj, A-Aj, -A-Aj, -A+Aj, -A+Aj, A-Aj, -A-Aj, A+Aj, A+Aj, A-Aj, A+Aj, - A+Aj, -A-Aj, -A-Aj, A+Aj, -A-Aj, -A-Aj, -A-Aj, -A-Aj, A-Aj, -A+Aj, -A-Aj, A-Aj, -A+Aj, A+Aj, -A+Aj, A-Aj, - A-Aj, A-Aj, A+Aj, -A-Aj, A-Aj, -A+Aj, A+Aj, A-Aj, -A-Aj, -A-Aj, -A+Aj, -A+Aj, A-Aj, A+Aj, -A+Aj, A+Aj |
| | Polarization 2 | A-Aj, A-Aj, -A-Aj, A-Aj, A-Aj, -A+Aj, A+Aj, -A-Aj, A-Aj, A-Aj, A+Aj, A+Aj, A+Aj, -A-Aj, A-Aj, A+Aj, A+Aj, -A+Aj, A-Aj, -A-Aj, -A+Aj, -A+Aj, -A-Aj, -A+Aj, A+Aj, -A+Aj, A+Aj, -A-Aj, -A-Aj, A-Aj, -A-Aj, -A+Aj, A+Aj, -A-Aj, A-Aj, -A+Aj, -A+Aj, A+Aj, -A-Aj, A-Aj, -A-Aj, A-Aj, A+Aj, -A+Aj, -A+Aj, -A+Aj, A-Aj, -A+Aj |
| 11 | Polarization 1 | A+Aj, A+Aj, A+Aj, A+Aj, A-Aj, A-Aj, -A-Aj, -A+Aj, -A+Aj, A-Aj, -A-Aj, A+Aj, A+Aj, A-Aj, A+Aj, -A+Aj, -A-Aj, -A-Aj, A+Aj, -A-Aj, -A-Aj, -A-Aj, -A-Aj, A-Aj, -A+Aj, -A-Aj, A-Aj, -A+Aj, A+Aj, -A+Aj, A-Aj, -A-Aj, A-Aj, A+Aj, -A-Aj, A-Aj, -A+Aj, A+Aj, A-Aj, -A-Aj, -A-Aj, -A+Aj, -A+Aj, A-Aj, A+Aj, -A+Aj, A+Aj, -A+Aj |
| | Polarization 2 | -A+Aj, A-Aj, A-Aj, A-Aj, -A-Aj, A-Aj, A-Aj, -A+Aj, A+Aj, -A-Aj, A-Aj, A-Aj, A+Aj, A+Aj, A+Aj, -A-Aj, A-Aj, A+Aj, A+Aj, -A+Aj, A-Aj, -A-Aj, -A+Aj, -A+Aj, -A-Aj, -A+Aj, A+Aj, -A+Aj, A+Aj, -A-Aj, -A-Aj, A-Aj, -A-Aj, -A+Aj, A+Aj, -A-Aj, A-Aj, -A+Aj, -A+Aj, A+Aj, -A-Aj, A-Aj, -A-Aj, A-Aj, A+Aj, -A+Aj, -A+Aj, -A+Aj |
| 12 | Polarization 1 | A+Aj, A+Aj, A+Aj, A+Aj, A-Aj, A-Aj, -A-Aj, -A+Aj, -A+Aj, A-Aj, -A-Aj, A+Aj, A+Aj, A-Aj, A+Aj, -A+Aj, -A-Aj, -A-Aj, A+Aj, -A-Aj, -A-Aj, -A-Aj, -A-Aj, A-Aj, -A+Aj, -A-Aj, A-Aj, -A+Aj, A+Aj, -A+Aj, A-Aj, -A-Aj, A-Aj, A+Aj, -A-Aj, A-Aj, -A+Aj, A+Aj, A-Aj, -A-Aj, -A-Aj, -A+Aj, -A+Aj, A-Aj, A+Aj, -A+Aj, A+Aj, -A+Aj |
| | Polarization 2 | A-Aj, A-Aj, -A-Aj, A-Aj, A-Aj, -A+Aj, A+Aj, -A-Aj, A-Aj, A-Aj, A+Aj, A+Aj, A+Aj, -A-Aj, A-Aj, A+Aj, A+Aj, -A+Aj, A-Aj, -A-Aj, -A+Aj, -A+Aj, -A-Aj, -A+Aj, A+Aj, -A+Aj, A+Aj, -A-Aj, -A-Aj, A-Aj, -A-Aj, -A+Aj, A+Aj, -A-Aj, A-Aj, -A+Aj, -A+Aj, A+Aj, -A-Aj, A-Aj, -A-Aj, A-Aj, A+Aj, -A+Aj, -A+Aj, -A+Aj, A-Aj, -A+Aj |

(continued)

| Index | Polarization | Pilot sequence |
|---|---|---|
| 13 | Polarization 1 | -A+Aj, A+Aj, -A+Aj, -A+Aj, -A-Aj, A-Aj, A-Aj, A+Aj, -A+Aj, A+Aj, -A+Aj, A+Aj, -A-Aj, A+Aj, -A-Aj, -A-Aj, -A+Aj, A-Aj, -A+Aj, -A-Aj, -A-Aj, A-Aj, -A-Aj, -A-Aj, -A-Aj, -A-Aj, A+Aj, -A+Aj, A+Aj, A-Aj, -A+Aj, A-Aj, A-Aj, A+Aj, A+Aj, -A+Aj, A+Aj, -A+Aj, A-Aj, A-Aj, -A-Aj, A+Aj, -A-Aj, A-Aj, A+Aj, -A-Aj, A+Aj, A-Aj |
| | Polarization 2 | A-Aj, A-Aj, A-Aj, -A+Aj, -A-Aj, A+Aj, -A+Aj, -A-Aj, A-Aj, -A-Aj, A+Aj, -A-Aj, -A+Aj, A-Aj, A+Aj, -A+Aj, A+Aj, A+Aj, -A-Aj, -A-Aj, A-Aj, -A+Aj, -A+Aj, A-Aj, -A-Aj, -A+Aj, A+Aj, -A-Aj, -A+Aj, -A+Aj, A+Aj, -A-Aj, A-Aj, -A+Aj, A-Aj, -A+Aj, -A-Aj, A+Aj, A+Aj, A+Aj, A-Aj, -A+Aj, A-Aj, -A+Aj, A-Aj, -A-Aj, A+Aj, A-Aj |
| 14 | Polarization 1 | -A+Aj, A+Aj, -A+Aj, -A+Aj, -A-Aj, A-Aj, A-Aj, A+Aj, -A+Aj, A+Aj, -A+Aj, A+Aj, -A-Aj, A+Aj, -A-Aj, -A-Aj, -A+Aj, A-Aj, -A+Aj, -A-Aj, -A-Aj, A-Aj, -A-Aj, -A-Aj, -A-Aj, -A-Aj, A+Aj, -A+Aj, A+Aj, A-Aj, -A+Aj, A-Aj, A-Aj, A+Aj, A+Aj, -A+Aj, A+Aj, -A+Aj, A-Aj, A-Aj, -A-Aj, A+Aj, -A-Aj, A-Aj, A+Aj, -A-Aj, A+Aj, A-Aj |
| | Polarization 2 | A-Aj, A-Aj, A-Aj, A-Aj, -A+Aj, -A-Aj, A+Aj, -A+Aj, -A-Aj, A-Aj, -A-Aj, A+Aj, -A-Aj, -A+Aj, A-Aj, A+Aj, - A+Aj, A+Aj, A+Aj, -A-Aj, -A-Aj, A-Aj, -A+Aj, -A+Aj, A-Aj, -A-Aj, -A+Aj, A+Aj, -A-Aj, -A+Aj, -A+Aj, A+Aj, -A-Aj, A-Aj, -A+Aj, A-Aj, -A+Aj, -A-Aj, A+Aj, A+Aj, A+Aj, A-Aj, -A+Aj, A-Aj, -A+Aj, A-Aj, -A-Aj, A+Aj |
| 15 | Polarization 1 | A+Aj, -A+Aj, -A+Aj, -A-Aj, A-Aj, A-Aj, A+Aj, -A+Aj, A+Aj, -A+Aj, A+Aj, -A-Aj, A+Aj, -A-Aj, -A-Aj, -A+Aj, A-Aj, -A+Aj, -A-Aj, -A-Aj, A-Aj, -A-Aj, -A-Aj, -A-Aj, -A-Aj, -A-Aj, A+Aj, -A+Aj, A+Aj, A-Aj, -A+Aj, A-Aj, A-Aj, A+Aj, A+Aj, -A+Aj, A+Aj, -A+Aj, A-Aj, A-Aj, -A-Aj, A+Aj, -A-Aj, A-Aj, A+Aj, -A-Aj, A+Aj, A-Aj, -A+Aj |
| | Polarization 2 | A-Aj, A-Aj, A-Aj, -A+Aj, -A-Aj, A+Aj, -A+Aj, -A-Aj, A-Aj, -A-Aj, A+Aj, -A-Aj, -A+Aj, A-Aj, A+Aj, -A+Aj, A+Aj, A+Aj, -A-Aj, -A-Aj, A-Aj, -A+Aj, -A+Aj, A-Aj, -A-Aj, -A+Aj, A+Aj, -A-Aj, -A+Aj, -A+Aj, A+Aj, -A-Aj, A-Aj, -A+Aj, A-Aj, -A+Aj, -A-Aj, A+Aj, A+Aj, A+Aj, A-Aj, -A+Aj, A-Aj, -A+Aj, A-Aj, -A-Aj, A+Aj, A-Aj |
| 16 | Polarization 1 | A+Aj, -A+Aj, -A+Aj, -A-Aj, A-Aj, A-Aj, A+Aj, -A+Aj, A+Aj, -A+Aj, A+Aj, -A-Aj, A+Aj, -A-Aj, -A+Aj, A-Aj, -A+Aj, -A-Aj, -A-Aj, A-Aj, -A-Aj, -A-Aj, -A-Aj, -A-Aj, -A-Aj, A+Aj, -A+Aj, A+Aj, A-Aj, -A+Aj, A-Aj, A-Aj, A+Aj, A+Aj, -A+Aj, A+Aj, -A+Aj, A-Aj, A-Aj, -A-Aj, A+Aj, -A-Aj, A-Aj, A+Aj, -A-Aj, A+Aj, A-Aj, -A+Aj |
| | Polarization 2 | A-Aj, A-Aj, A-Aj, A-Aj, -A+Aj, -A-Aj, A+Aj, -A+Aj, -A-Aj, A-Aj, -A-Aj, A+Aj, -A-Aj, -A+Aj, A-Aj, A+Aj, - A+Aj, A+Aj, A+Aj, -A-Aj, -A-Aj, A-Aj, -A+Aj, -A+Aj, A-Aj, -A-Aj, -A+Aj, A+Aj, -A-Aj, -A+Aj, -A+Aj, A+Aj, -A-Aj, A-Aj, -A+Aj, A-Aj, -A+Aj, -A-Aj, A+Aj, A+Aj, A+Aj, A-Aj, -A+Aj, A-Aj, -A+Aj, A-Aj, -A-Aj, A+Aj |
| 17 | Polarization 1 | -A-Aj, -A+Aj, -A-Aj, A-Aj, A+Aj, -A-Aj, A-Aj, -A+Aj, -A-Aj, -A+Aj, A-Aj, A-Aj, -A+Aj, -A+Aj, -A+Aj, A-Aj, A+Aj, A+Aj, A-Aj, -A-Aj, -A-Aj, A+Aj, -A-Aj, -A-Aj, A-Aj, A+Aj, -A+Aj, A-Aj, A-Aj, -A+Aj, -A-Aj, A+Aj, A+Aj, -A-Aj, A+Aj, A+Aj, A+Aj, -A-Aj, -A-Aj, A-Aj, A-Aj, A+Aj, A+Aj, -A+Aj, -A+Aj, -A+Aj, -A-Aj, A+Aj |
| | Polarization 2 | -A-Aj, A-Aj, A-Aj, -A+Aj, -A+Aj, A+Aj, -A-Aj, -A+Aj, A-Aj, A-Aj, A-Aj, -A+Aj, A-Aj, -A-Aj, A+Aj, -A-Aj, - A-Aj, -A+Aj, A+Aj, A-Aj, -A-Aj, A-Aj, A-Aj, A-Aj, A-Aj, -A-Aj, -A+Aj, A+Aj, -A+Aj, A+Aj, -A+Aj, A+Aj, -A-Aj, -A+Aj, -A+Aj, A-Aj, -A+Aj, A+Aj, A-Aj, A+Aj, -A+Aj, -A+Aj, A+Aj, -A-Aj, A+Aj, -A-Aj, -A-Aj, A+Aj |
| 18 | Polarization 1 | A+Aj, -A-Aj, -A-Aj, -A+Aj, -A-Aj, A-Aj, A+Aj, -A-Aj, A-Aj, -A+Aj, -A-Aj, -A+Aj, A-Aj, A-Aj, -A+Aj, -A+Aj, -A+Aj, A-Aj, A+Aj, A+Aj, A-Aj, -A-Aj, -A-Aj, A+Aj, -A-Aj, -A-Aj, A-Aj, A+Aj, -A+Aj, A-Aj, A-Aj, -A+Aj, -A-Aj, A+Aj, A+Aj, -A-Aj, A+Aj, A+Aj, A+Aj, -A-Aj, -A-Aj, A-Aj, A-Aj, A+Aj, A+Aj, -A+Aj, -A+Aj, -A+Aj |
| | Polarization 2 | -A-Aj, A-Aj, A-Aj, -A+Aj, -A+Aj, A+Aj, -A-Aj, -A+Aj, A-Aj, A-Aj, A-Aj, -A+Aj, A-Aj, -A-Aj, A+Aj, -A-Aj, - A-Aj, -A+Aj, A+Aj, A-Aj, -A-Aj, A-Aj, A-Aj, A-Aj, A-Aj, -A-Aj, -A+Aj, A+Aj, -A+Aj, A+Aj, -A+Aj, A+Aj, -A-Aj, -A+Aj, -A+Aj, A-Aj, -A+Aj, A+Aj, A-Aj, A+Aj, -A+Aj, -A+Aj, A+Aj, -A-Aj, A+Aj, -A-Aj, -A-Aj, A+Aj |

(continued)

| Index | Polarization | Pilot sequence |
|---|---|---|
| 19 | Polarization 1 | A-Aj, A+Aj, A-Aj, A+Aj, -A+Aj, A-Aj, A-Aj, -A-Aj, -A-Aj, -A+Aj, A+Aj, A-Aj, -A+Aj, -A-Aj, A+Aj, -A+Aj, - A-Aj, -A+Aj, A-Aj, A+Aj, A-Aj, -A+Aj, -A-Aj, A-Aj, -A+Aj, -A-Aj, -A-Aj, -A-Aj, -A-Aj, A+Aj, -A-Aj, -A-Aj, A-Aj, A+Aj, -A+Aj, A+Aj, A+Aj, -A-Aj, -A+Aj, A-Aj, A-Aj, -A-Aj, -A+Aj, -A+Aj, A+Aj, A+Aj, A+Aj, A+Aj |
|  | Polarization 2 | A-Aj, -A+Aj, A-Aj, A-Aj, A-Aj, A+Aj, -A+Aj, -A-Aj, -A+Aj, -A-Aj, A+Aj, A-Aj, A-Aj, -A+Aj, -A-Aj, A+Aj, A-Aj, -A-Aj, -A+Aj, -A-Aj, -A-Aj, A+Aj, A-Aj, A+Aj, A-Aj, -A-Aj, A-Aj, A-Aj, -A-Aj, -A+Aj, A-Aj, A+Aj, A+Aj, -A+Aj, -A-Aj, A+Aj, A+Aj, A+Aj, -A+Aj, -A+Aj, -A-Aj, A+Aj, A-Aj, -A+Aj, -A+Aj, -A-Aj, -A+Aj, -A+Aj |
| 20 | Polarization 1 | A-Aj, A+Aj, A-Aj, A+Aj, -A+Aj, A-Aj, A-Aj, -A-Aj, -A-Aj, -A+Aj, A+Aj, A-Aj, -A+Aj, -A-Aj, A+Aj, -A+Aj, - A-Aj, -A+Aj, A-Aj, A+Aj, A-Aj, -A+Aj, -A-Aj, A-Aj, -A+Aj, -A-Aj, -A-Aj, -A-Aj, -A-Aj, A+Aj, -A-Aj, -A-Aj, A-Aj, A+Aj, -A+Aj, A+Aj, A+Aj, -A-Aj, -A+Aj, A-Aj, A-Aj, -A-Aj, -A+Aj, -A+Aj, A+Aj, A+Aj, A+Aj, A+Aj |
|  | Polarization 2 | A-Aj, A-Aj, A-Aj, A+Aj, -A+Aj, -A-Aj, -A+Aj, -A-Aj, A+Aj, A-Aj, A-Aj, -A+Aj, -A-Aj, A+Aj, A-Aj, -A-Aj, - A+Aj, -A-Aj, -A-Aj, A+Aj, A-Aj, A+Aj, A-Aj, -A-Aj, A-Aj, A-Aj, -A-Aj, -A+Aj, A-Aj, A+Aj, A+Aj, -A+Aj, -A-Aj, A+Aj, A+Aj, A+Aj, -A+Aj, -A+Aj, -A-Aj, A+Aj, A-Aj, -A+Aj, -A+Aj, -A-Aj, -A+Aj, -A+Aj, -A+Aj, A-Aj |
| 21 | Polarization 1 | A+Aj, A-Aj, A+Aj, -A+Aj, A-Aj, A-Aj, -A-Aj, -A-Aj, -A+Aj, A+Aj, A-Aj, -A+Aj, -A-Aj, A+Aj, -A+Aj, -A-Aj, - A+Aj, A-Aj, A+Aj, A-Aj, -A+Aj, -A-Aj, A-Aj, -A+Aj, -A-Aj, -A-Aj, -A-Aj, A+Aj, -A-Aj, -A-Aj, A-Aj, A+Aj, -A+Aj, A+Aj, A+Aj, -A-Aj, -A+Aj, A-Aj, A-Aj, -A-Aj, -A+Aj, -A+Aj, A+Aj, A+Aj, A+Aj, A+Aj, A-Aj |
|  | Polarization 2 | A-Aj, -A+Aj, A-Aj, A-Aj, A-Aj, A+Aj, -A+Aj, -A-Aj, -A+Aj, -A-Aj, A+Aj, A-Aj, A-Aj, -A+Aj, -A-Aj, A+Aj, A-Aj, -A-Aj, -A+Aj, -A-Aj, -A-Aj, A+Aj, A-Aj, A+Aj, A-Aj, -A-Aj, A-Aj, A-Aj, -A-Aj, -A+Aj, A-Aj, A+Aj, A+Aj, -A+Aj, -A-Aj, A+Aj, A+Aj, A+Aj, -A+Aj, -A+Aj, -A-Aj, A+Aj, A-Aj, -A+Aj, -A+Aj, -A-Aj, -A+Aj, -A+Aj |
| 22 | Polarization 1 | A+Aj, A-Aj, A+Aj, -A+Aj, A-Aj, A-Aj, -A-Aj, -A-Aj, -A+Aj, A+Aj, A-Aj, -A+Aj, -A-Aj, A+Aj, -A+Aj, -A-Aj, - A+Aj, A-Aj, A+Aj, A-Aj, -A+Aj, -A-Aj, A-Aj, -A+Aj, -A-Aj, -A-Aj, -A-Aj, A+Aj, -A-Aj, -A-Aj, A-Aj, A+Aj, -A+Aj, A+Aj, A+Aj, -A-Aj, -A+Aj, A-Aj, A-Aj, -A-Aj, -A+Aj, -A+Aj, A+Aj, A+Aj, A+Aj, A+Aj, A-Aj |
|  | Polarization 2 | A-Aj, A-Aj, A-Aj, A+Aj, -A+Aj, -A-Aj, -A+Aj, -A-Aj, A+Aj, A-Aj, A-Aj, -A+Aj, -A-Aj, A+Aj, A-Aj, -A-Aj, - A+Aj, -A-Aj, -A-Aj, A+Aj, A-Aj, A+Aj, A-Aj, -A-Aj, A-Aj, A-Aj, -A-Aj, -A+Aj, A-Aj, A+Aj, A+Aj, -A+Aj, -A-Aj, A+Aj, A+Aj, A+Aj, -A+Aj, -A+Aj, -A-Aj, A+Aj, A-Aj, -A+Aj, -A+Aj, -A-Aj, -A+Aj, -A+Aj, -A+Aj, A-Aj |
| 23 | Polarization 1 | -A+Aj, A+Aj, -A-Aj, A+Aj, -A+Aj, -A-Aj, A+Aj, -A-Aj, -A+Aj, -A+Aj, A-Aj, A+Aj, A-Aj, A+Aj, A+Aj, -A+Aj, -A+Aj, A-Aj, -A+Aj, A+Aj, A-Aj, A+Aj, -A-Aj, -A-Aj, -A-Aj, -A-Aj, -A+Aj, -A-Aj, -A-Aj, A-Aj, -A+Aj, A-Aj, - A-Aj, -A-Aj, A+Aj, -A-Aj, A+Aj, A-Aj, A+Aj, A-Aj, A+Aj, -A+Aj, -A+Aj, -A-Aj, A-Aj, A-Aj, A+Aj, A-Aj |
|  | Polarization 2 | -A+Aj, A+Aj, -A-Aj, -A+Aj, A-Aj, -A+Aj, A-Aj, -A+Aj, A+Aj, A+Aj, A+Aj, -A-Aj, A-Aj, -A+Aj, A-Aj, -A+Aj, -A-Aj, A+Aj, A-Aj, A-Aj, -A-Aj, A+Aj, A-Aj, -A-Aj, -A+Aj, A-Aj, A-Aj, -A+Aj, -A-Aj, -A-Aj, A+Aj, A+Aj, A-Aj, A+Aj, -A+Aj, A-Aj, -A-Aj, A+Aj, -A-Aj, -A+Aj, -A-Aj, A-Aj, A+Aj, -A-Aj, A-Aj, -A+Aj, -A+Aj, -A+Aj |
| 24 | Polarization 1 | -A+Aj, A+Aj, -A-Aj, A+Aj, -A+Aj, -A-Aj, A+Aj, -A-Aj, -A+Aj, -A+Aj, A-Aj, A+Aj, A-Aj, A+Aj, A+Aj, -A+Aj, -A+Aj, A-Aj, -A+Aj, A+Aj, A-Aj, A+Aj, -A-Aj, -A-Aj, -A-Aj, -A-Aj, -A+Aj, -A-Aj, -A-Aj, A-Aj, -A+Aj, A-Aj, - A-Aj, -A-Aj, A+Aj, -A-Aj, A+Aj, A-Aj, A+Aj, A-Aj, A+Aj, -A+Aj, -A+Aj, -A-Aj, A-Aj, A-Aj, A+Aj, A-Aj |
|  | Polarization 2 | A+Aj, -A-Aj, -A+Aj, A-Aj, -A+Aj, A-Aj, -A+Aj, A+Aj, A+Aj, A+Aj, -A-Aj, A-Aj, -A+Aj, A-Aj, -A+Aj, -A-Aj, A+Aj, A-Aj, A-Aj, -A-Aj, A+Aj, A-Aj, -A-Aj, -A+Aj, A-Aj, A-Aj, -A+Aj, -A-Aj, -A-Aj, A+Aj, A+Aj, A-Aj, A+Aj, -A+Aj, A-Aj, -A-Aj, A+Aj, -A-Aj, -A+Aj, -A-Aj, A-Aj, A+Aj, -A-Aj, A-Aj, -A+Aj, -A+Aj, -A+Aj, -A+Aj |

(continued)

| Index | Polarization | Pilot sequence |
|---|---|---|
| 25 | Polarization 1 | A-Aj, -A+Aj, A+Aj, -A-Aj, A+Aj, -A+Aj, -A-Aj, A+Aj, -A-Aj, -A+Aj, -A+Aj, A-Aj, A+Aj, A-Aj, A+Aj, A+Aj, - A+Aj, -A+Aj, A-Aj, -A+Aj, A+Aj, A-Aj, A+Aj, -A-Aj, -A-Aj, -A-Aj, -A-Aj, -A+Aj, -A-Aj, -A-Aj, A-Aj, -A+Aj, A-Aj, -A-Aj, -A-Aj, A+Aj, -A-Aj, A+Aj, A-Aj, A+Aj, A-Aj, A+Aj, -A+Aj, -A+Aj, -A-Aj, A-Aj, A-Aj, A+Aj |
| | Polarization 2 | -A+Aj, A+Aj, -A-Aj, -A+Aj, A-Aj, -A+Aj, A-Aj, -A+Aj, A+Aj, A+Aj, A+Aj, -A-Aj, A-Aj, -A+Aj, A-Aj, -A+Aj, -A-Aj, A+Aj, A-Aj, A-Aj, -A-Aj, A+Aj, A-Aj, -A-Aj, -A+Aj, A-Aj, A-Aj, -A+Aj, -A-Aj, -A-Aj, A+Aj, A+Aj, A-Aj, A+Aj, -A+Aj, A-Aj, -A-Aj, A+Aj, -A-Aj, -A+Aj, -A-Aj, A-Aj, A+Aj, -A-Aj, A-Aj, -A+Aj, -A+Aj, -A+Aj |
| 26 | Polarization 1 | A-Aj, -A+Aj, A+Aj, -A-Aj, A+Aj, -A+Aj, -A-Aj, A+Aj, -A-Aj, -A+Aj, -A+Aj, A-Aj, A+Aj, A-Aj, A+Aj, A+Aj, - A+Aj, -A+Aj, A-Aj, -A+Aj, A+Aj, A-Aj, A+Aj, -A-Aj, -A-Aj, -A-Aj, -A-Aj, -A+Aj, -A-Aj, -A-Aj, A-Aj, -A+Aj, A-Aj, -A-Aj, -A-Aj, A+Aj, -A-Aj, A+Aj, A-Aj, A+Aj, A-Aj, A+Aj, -A+Aj, -A+Aj, -A-Aj, A-Aj, A-Aj, A+Aj |
| | Polarization 2 | A+Aj, -A-Aj, -A+Aj, A-Aj, -A+Aj, A-Aj, -A+Aj, A+Aj, A+Aj, A+Aj, -A-Aj, A-Aj, -A+Aj, A-Aj, -A+Aj, -A-Aj, A+Aj, A-Aj, A-Aj, -A-Aj, A+Aj, A-Aj, -A-Aj, -A+Aj, A-Aj, A-Aj, -A+Aj, -A-Aj, -A-Aj, A+Aj, A+Aj, A-Aj, A+Aj, -A+Aj, A-Aj, -A-Aj, A+Aj, -A-Aj, -A+Aj, -A-Aj, A-Aj, A+Aj, -A-Aj, A-Aj, -A+Aj, -A+Aj, -A+Aj, -A+Aj |
| 27 | Polarization 1 | A-Aj, A-Aj, A-Aj, A+Aj, A+Aj, -A+Aj, -A+Aj, -A-Aj, -A-Aj, A+Aj, A+Aj, A+Aj, -A-Aj, A+Aj, A+Aj, -A-Aj, A-Aj, -A+Aj, -A+Aj, A-Aj, A+Aj, -A+Aj, -A-Aj, -A-Aj, A+Aj, -A-Aj, -A-Aj, -A+Aj, A+Aj, A+Aj, -A+Aj, A-Aj, A-Aj, A-Aj, -A+Aj, -A+Aj, A-Aj, -A-Aj, A-Aj, -A+Aj, -A-Aj, A+Aj, -A+Aj, -A-Aj, A-Aj, -A-Aj, -A-Aj, A+Aj |
| | Polarization 2 | A+Aj, -A-Aj, -A-Aj, A+Aj, -A-Aj, A+Aj, A-Aj, A-Aj, A+Aj, -A+Aj, A+Aj, A-Aj, -A+Aj, A-Aj, A-Aj, -A-Aj, A+Aj, A-Aj, A+Aj, A-Aj, A+Aj, A-Aj, -A-Aj, -A+Aj, -A+Aj, -A+Aj, -A+Aj, -A-Aj, -A+Aj, A+Aj, A-Aj, -A-Aj, - A-Aj, A+Aj, -A-Aj, -A+Aj, A-Aj, -A+Aj, -A+Aj, -A+Aj, A-Aj, -A-Aj, A+Aj, A-Aj, A-Aj, -A+Aj, -A+Aj, -A-Aj |
| 28 | Polarization 1 | A+Aj, -A-Aj, A-Aj, A-Aj, A-Aj, A+Aj, A+Aj, -A+Aj, -A+Aj, -A-Aj, -A-Aj, A+Aj, A+Aj, A+Aj, -A-Aj, A+Aj, A+Aj, -A-Aj, A-Aj, -A+Aj, -A+Aj, A-Aj, A+Aj, -A+Aj, -A-Aj, -A-Aj, A+Aj, -A-Aj, -A-Aj, -A+Aj, A+Aj, A+Aj, -A+Aj, A-Aj, A-Aj, A-Aj, -A+Aj, -A+Aj, A-Aj, -A-Aj, A-Aj, -A+Aj, -A-Aj, A+Aj, -A+Aj, -A-Aj, A-Aj, -A-Aj |
| | Polarization 2 | A+Aj, -A-Aj, -A-Aj, A+Aj, -A-Aj, A+Aj, A-Aj, A-Aj, A+Aj, -A+Aj, A+Aj, A-Aj, -A+Aj, A-Aj, A-Aj, -A-Aj, A+Aj, A-Aj, A+Aj, A-Aj, A+Aj, A-Aj, -A-Aj, -A+Aj, -A+Aj, -A+Aj, -A+Aj, -A-Aj, -A+Aj, A+Aj, A-Aj, -A-Aj, - A-Aj, A+Aj, -A-Aj, -A+Aj, A-Aj, -A+Aj, -A+Aj, -A+Aj, A-Aj, -A-Aj, A+Aj, A-Aj, A-Aj, -A+Aj, -A+Aj, -A-Aj |

(2) It is assumed that $N_{PS}$ = 56. If a remainder of $N_{TS}$ divided by 4 is 1, the pilot sequence is one item in the following Table 9-1. If a remainder of $N_{TS}$ divided by 4 is 3, the pilot sequence is one item in the following Table 9-1 or Table 9-2.

**Table 9-1**

| Index | Polarization | Pilot sequence |
|---|---|---|
| 1 | Polarization 1 | -A-Aj, -A-Aj, A+Aj, A+Aj, A-Aj, -A-Aj, A+Aj, A-Aj, A+Aj, A+Aj, -A+Aj, A-Aj, A+Aj, -A-Aj, A+Aj, A-Aj, -A+Aj, -A-Aj, A-Aj, A-Aj, A+Aj, -A+Aj, -A-Aj, A-Aj, -A-Aj, -A-Aj, A-Aj, -A-Aj, A-Aj, -A+Aj, A+Aj, A-Aj, -A+Aj, A-Aj, -A+Aj, -A+Aj, A+Aj, -A+Aj, -A+Aj, -A+Aj, -A-Aj, -A+Aj, A-Aj, -A-Aj, -A-Aj, -A-Aj, A+Aj, -A+Aj, -A+Aj, A+Aj, A+Aj, A-Aj, A-Aj, -A-Aj, -A+Aj, A+Aj |
| | Polarization 2 | -A+Aj, -A+Aj, A-Aj, A-Aj, A+Aj, -A+Aj, A-Aj, A+Aj, A-Aj, A-Aj, -A-Aj, A+Aj, A-Aj, -A+Aj, A-Aj, A+Aj, -A-Aj, -A+Aj, A+Aj, A+Aj, A-Aj, -A-Aj, -A+Aj, A+Aj, -A+Aj, -A+Aj, A+Aj, -A+Aj, A+Aj, -A-Aj, A-Aj, A+Aj, -A-Aj, A+Aj, -A-Aj, -A-Aj, A-Aj, -A-Aj, -A-Aj, -A-Aj, -A+Aj, -A-Aj, A+Aj, -A+Aj, -A+Aj, -A+Aj, A-Aj, -A-Aj, -A-Aj, A-Aj, A-Aj, A+Aj, A+Aj, -A+Aj, -A-Aj, A-Aj |

(continued)

| Index | Polarization | Pilot sequence |
|---|---|---|
| 2 | Polarization 1 | -A-Aj, -A-Aj, A+Aj, A+Aj, A-Aj, -A-Aj, A+Aj, A-Aj, A+Aj, A+Aj, -A+Aj, A-Aj, A+Aj, -A-Aj, A+Aj, A-Aj, -A+Aj, -A-Aj, A-Aj, A-Aj, A+Aj, -A+Aj, -A-Aj, A-Aj, -A-Aj, -A-Aj, A-Aj, -A-Aj, A-Aj, -A+Aj, A+Aj, A-Aj, -A+Aj, A-Aj, -A+Aj, -A+Aj, A+Aj, -A+Aj, -A+Aj, -A+Aj, -A-Aj, -A+Aj, A-Aj, -A-Aj, -A-Aj, -A-Aj, A+Aj, -A+Aj, -A+Aj, A+Aj, A+Aj, A-Aj, A-Aj, -A-Aj, -A+Aj, A+Aj |
| | Polarization 2 | A-Aj, A-Aj, -A+Aj, -A+Aj, -A-Aj, A-Aj, -A+Aj, -A-Aj, -A+Aj, -A+Aj, A+Aj, -A-Aj, -A+Aj, A-Aj, -A+Aj, -A-Aj, A+Aj, A-Aj, -A-Aj, -A-Aj, -A+Aj, A+Aj, A-Aj, -A-Aj, A-Aj, A-Aj, -A-Aj, A-Aj, -A-Aj, A+Aj, - A+Aj, -A-Aj, A+Aj, -A-Aj, A+Aj, A+Aj, -A+Aj, A+Aj, A+Aj, A+Aj, A-Aj, A+Aj, -A-Aj, A-Aj, A-Aj, A-Aj, -A+Aj, A+Aj, A+Aj, -A+Aj, -A+Aj, -A-Aj, -A-Aj, A-Aj, A+Aj, -A+Aj |
| 3 | Polarization 1 | -A+Aj, -A+Aj, A-Aj, A-Aj, A+Aj, -A+Aj, A-Aj, A+Aj, A-Aj, A-Aj, -A-Aj, A+Aj, A-Aj, -A+Aj, A-Aj, A+Aj, -A-Aj, -A+Aj, A+Aj, A+Aj, A-Aj, -A-Aj, -A+Aj, A+Aj, -A+Aj, -A+Aj, A+Aj, -A+Aj, A+Aj, -A-Aj, A-Aj, A+Aj, -A-Aj, A+Aj, -A-Aj, -A-Aj, A-Aj, -A-Aj, -A-Aj, -A-Aj, -A+Aj, -A-Aj, A+Aj, -A+Aj, -A+Aj, -A+Aj, A-Aj, -A-Aj, -A-Aj, A-Aj, A-Aj, A+Aj, A+Aj, -A+Aj, -A-Aj, A-Aj |
| | Polarization 2 | A+Aj, A+Aj, -A-Aj, -A-Aj, -A+Aj, A+Aj, -A-Aj, -A+Aj, -A-Aj, -A-Aj, A-Aj, -A+Aj, -A-Aj, A+Aj, -A-Aj, -A+Aj, A-Aj, A+Aj, -A+Aj, -A+Aj, -A-Aj, A-Aj, A+Aj, -A+Aj, A+Aj, A+Aj, -A+Aj, A+Aj, -A+Aj, A-Aj, - A-Aj, -A+Aj, A-Aj, -A+Aj, A-Aj, A-Aj. -A-Aj, A-Aj, A-Aj, A-Aj, A+Aj, A-Aj, -A+Aj, A+Aj, A+Aj, A+Aj, -A-Aj, A-Aj, A-Aj, -A-Aj, -A-Aj, -A+Aj, -A+Aj, A+Aj, A-Aj, -A-Aj |
| 4 | Polarization 1 | A-Aj, A-Aj, -A+Aj, -A+Aj, -A-Aj, A-Aj, -A+Aj, -A-Aj, -A+Aj, -A+Aj, A+Aj, -A-Aj, -A+Aj, A-Aj, -A+Aj, -A-Aj, A+Aj, A-Aj, -A-Aj, -A-Aj, -A+Aj, A+Aj, A-Aj, -A-Aj, A-Aj, A-Aj, -A-Aj, A-Aj, -A-Aj, A+Aj, - A+Aj, -A-Aj, A+Aj, -A-Aj, A+Aj, A+Aj, -A+Aj, A+Aj, A+Aj, A+Aj, A-Aj, A+Aj, -A-Aj, A-Aj, A-Aj, A-Aj, -A+Aj, A+Aj, A+Aj, -A+Aj, -A+Aj, -A-Aj, -A-Aj, A-Aj, A+Aj, -A+Aj |
| | Polarization 2 | A+Aj, A+Aj, -A-Aj, -A-Aj, -A+Aj, A+Aj, -A-Aj, -A+Aj, -A-Aj, -A-Aj, A-Aj, -A+Aj, -A-Aj, A+Aj, -A-Aj, -A+Aj, A-Aj, A+Aj, -A+Aj, -A+Aj, -A-Aj, A-Aj, A+Aj, -A+Aj, A+Aj, A+Aj, -A+Aj, A+Aj, -A+Aj, A-Aj, - A-Aj, -A+Aj, A-Aj, -A+Aj, A-Aj, A-Aj. -A-Aj, A-Aj, A-Aj, A-Aj, A+Aj, A-Aj, -A+Aj, A+Aj, A+Aj, A+Aj, -A-Aj, A-Aj, A-Aj, -A-Aj, -A-Aj, -A+Aj, -A+Aj, A+Aj, A-Aj, -A-Aj |
| 5 | Polarization 1 | -A-Aj, -A+Aj, A+Aj, A-Aj, A-Aj, -A-Aj, -A-Aj, -A+Aj, -A+Aj, -A-Aj, A+Aj, A+Aj, A+Aj, A-Aj, -A+Aj, A+Aj, -A+Aj, -A+Aj, -A+Aj, -A-Aj, -A+Aj, -A+Aj, A-Aj, -A+Aj, A-Aj, -A-Aj, -A+Aj, A-Aj, A+Aj, A-Aj, A+Aj, A+Aj, A-Aj, A+Aj, -A+Aj, -A-Aj, A-Aj, A-Aj, A+Aj, -A+Aj, A-Aj, -A-Aj, A+Aj, -A-Aj, A-Aj, - A+Aj, -A-Aj, -A-Aj, A-Aj, -A-Aj, A+Aj, A-Aj, -A-Aj, -A-Aj, A+Aj, A+Aj |
| | Polarization 2 | -A+Aj, -A-Aj, A-Aj, A+Aj, A+Aj, -A+Aj, -A+Aj, -A-Aj, -A-Aj, -A+Aj, A-Aj, A-Aj, A-Aj, A+Aj, -A-Aj, A-Aj, -A-Aj, -A-Aj, -A-Aj, -A+Aj, -A-Aj, -A-Aj, A+Aj, -A-Aj, A+Aj, -A+Aj, -A-Aj, A+Aj, A-Aj, A+Aj, A-Aj, A-Aj, A+Aj, A-Aj, -A-Aj, -A+Aj. A+Aj, A+Aj, A-Aj, -A-Aj, A+Aj, -A+Aj, A-Aj, -A+Aj, A+Aj, -A-Aj, -A+Aj, -A+Aj, A+Aj, -A+Aj, A-Aj, A+Aj, -A+Aj, -A+Aj, A-Aj, A-Aj |
| 6 | Polarization 1 | -A-Aj, -A+Aj, A+Aj, A-Aj, A-Aj, -A-Aj, -A-Aj, -A+Aj, -A+Aj, -A-Aj, A+Aj, A+Aj, A+Aj, A-Aj, -A+Aj, A+Aj, -A+Aj, -A+Aj, -A+Aj, -A-Aj, -A+Aj, -A+Aj, A-Aj, -A+Aj, A-Aj, -A-Aj, -A+Aj, A-Aj, A+Aj, A-Aj, A+Aj, A+Aj, A-Aj, A+Aj, -A+Aj, -A-Aj, A-Aj, A-Aj, A-Aj, A+Aj, -A+Aj, A-Aj, -A-Aj, A+Aj, - A+Aj, -A-Aj, -A-Aj, A-Aj, -A-Aj, A+Aj, A-Aj, -A-Aj, -A-Aj, A+Aj, A+Aj |
| | Polarization 2 | A-Aj, A+Aj, -A+Aj, -A-Aj, -A-Aj, A-Aj, A-Aj, A+Aj, A+Aj, A-Aj, -A+Aj, -A+Aj, -A+Aj, -A-Aj, A+Aj, - A+Aj, A+Aj, A+Aj, A+Aj, A-Aj, A+Aj. A+Aj, -A-Aj, A+Aj, -A-Aj, A-Aj, A+Aj, -A-Aj, -A+Aj, -A-Aj, - A+Aj, -A+Aj, -A-Aj, -A+Aj, A+Aj, A-Aj, -A-Aj, -A-Aj, -A+Aj, A+Aj, -A-Aj, A-Aj, -A+Aj, A-Aj, -A-Aj, A+Aj, A-Aj, A-Aj, -A-Aj, A-Aj, -A+Aj. -A-Aj, A-Aj, A-Aj, -A+Aj, -A+Aj |
| 7 | Polarization 1 | -A+Aj, -A-Aj, A-Aj, A+Aj, A+Aj, -A+Aj, -A+Aj, -A-Aj, -A-Aj, -A+Aj, A-Aj, A-Aj, A-Aj, A+Aj, -A-Aj, A-Aj, -A-Aj, -A-Aj, -A-Aj, -A+Aj, -A-Aj, -A-Aj, A+Aj, -A-Aj, A+Aj, -A+Aj, -A-Aj, A+Aj, A-Aj, A+Aj, A-Aj, A-Aj, A+Aj, A-Aj, -A-Aj, -A+Aj. A+Aj, A+Aj, A-Aj, -A-Aj, A+Aj, -A+Aj, A-Aj, -A+Aj, A+Aj, -A-Aj, -A+Aj, -A+Aj, A+Aj, -A+Aj, A-Aj, A+Aj, -A+Aj, -A+Aj, A-Aj, A-Aj |
| | Polarization 2 | A+Aj, A-Aj, -A-Aj, -A+Aj, -A+Aj, A+Aj, A+Aj, A-Aj, A-Aj, A+Aj, -A-Aj, -A-Aj, -A-Aj, -A+Aj, A-Aj, - A-Aj, A-Aj, A-Aj, A-Aj, A+Aj, A-Aj, A-Aj, -A+Aj, A-Aj, -A+Aj, A+Aj, A-Aj, -A+Aj, -A-Aj, -A+Aj, -A-Aj, -A-Aj, -A+Aj, -A-Aj, A-Aj, A+Aj, -A+Aj, -A+Aj, -A-Aj, A-Aj, -A+Aj, A+Aj, -A-Aj, A+Aj, -A+Aj, A-Aj, A+Aj, A+Aj, -A+Aj, A+Aj, -A-Aj, -A+Aj, A+Aj, A+Aj, -A-Aj, -A-Aj |

(continued)

| Index | Polarization | Pilot sequence |
|---|---|---|
| 8 | Polarization 1 | A-Aj, A+Aj, -A+Aj, -A-Aj, -A-Aj, A-Aj, A-Aj, A+Aj, A+Aj, A-Aj, -A+Aj, -A+Aj, -A+Aj, -A-Aj, A+Aj, - A+Aj, A+Aj, A+Aj, A+Aj, A-Aj, A+Aj. A+Aj, -A-Aj, A+Aj, -A-Aj, A-Aj, A+Aj, -A-Aj, -A+Aj, -A-Aj, - A+Aj, -A+Aj, -A-Aj, -A+Aj, A+Aj, A-Aj, -A-Aj, -A-Aj, -A+Aj, A+Aj, -A-Aj, A-Aj, -A+Aj, A-Aj, -A-Aj, A+Aj, A-Aj, A-Aj, -A-Aj, A-Aj, -A+Aj. -A-Aj, A-Aj, A-Aj, -A+Aj, -A+Aj |
| | Polarization 2 | A+Aj, A-Aj, -A-Aj, -A+Aj, -A+Aj, A+Aj, A+Aj, A-Aj, A-Aj, A+Aj, -A-Aj, -A-Aj, -A-Aj, -A+Aj, A-Aj, - A-Aj, A-Aj, A-Aj, A-Aj, A+Aj, A-Aj, A-Aj, -A+Aj, A-Aj, -A+Aj, A+Aj, A-Aj, -A+Aj, -A-Aj, -A+Aj, -A-Aj, -A-Aj, -A+Aj, -A-Aj, A-Aj, A+Aj, -A+Aj, -A+Aj, -A-Aj, A-Aj, -A+Aj, A+Aj, -A-Aj, A+Aj, -A+Aj, A-Aj, A+Aj, A+Aj, -A+Aj, A+Aj, -A-Aj, -A+Aj, A+Aj, A+Aj, -A-Aj, -A-Aj |
| 9 | Polarization 1 | -A-Aj, A+Aj, -A+Aj, A+Aj, -A+Aj, A+Aj, A+Aj, A-Aj, A+Aj, -A+Aj, A-Aj, -A+Aj, -A+Aj, A-Aj, -A-Aj, - A+Aj, -A-Aj, -A+Aj, A+Aj, A-Aj, -A-Aj, -A-Aj, -A-Aj, A+Aj, A-Aj, -A-Aj, A-Aj, -A+Aj, A+Aj, -A+Aj, - A+Aj, A-Aj, A-Aj, -A-Aj, -A-Aj, A-Aj, A-Aj, A-Aj, A+Aj, A+Aj, -A+Aj, -A-Aj, A-Aj, -A-Aj, -A+Aj, A-Aj, -A-Aj, A+Aj, -A+Aj, -A+Aj, -A-Aj. A+Aj, -A-Aj, A+Aj, A+Aj, A-Aj |
| | Polarization 2 | -A-Aj, A+Aj, -A-Aj, -A-Aj, -A+Aj, A-Aj, A+Aj, -A+Aj, -A+Aj, A+Aj, -A+Aj, -A-Aj, -A+Aj, A-Aj, - A+Aj, -A-Aj, -A+Aj, -A-Aj, -A-Aj, -A-Aj, A-Aj, -A+Aj, -A-Aj, A+Aj, -A+Aj, -A-Aj, A+Aj, A+Aj, -A+Aj, A+Aj, -A-Aj, -A-Aj, A+Aj, A+Aj, A+Aj, A-Aj, -A-Aj, A+Aj, A-Aj, A+Aj, -A-Aj, -A+Aj, -A+Aj, -A-Aj, A-Aj, A+Aj, A+Aj, A-Aj, A-Aj, A-Aj, A-Aj, -A-Aj, -A+Aj, -A+Aj, A-Aj, A+Aj |
| 10 | Polarization 1 | -A-Aj, A+Aj, -A+Aj, A+Aj, -A+Aj, A+Aj, A+Aj, A-Aj, A+Aj, -A+Aj, A-Aj, -A+Aj, -A+Aj, A-Aj, -A-Aj, - A+Aj, -A-Aj, -A+Aj, A+Aj, A-Aj, -A-Aj, -A-Aj, -A-Aj, A+Aj, A-Aj, -A-Aj, A-Aj, -A+Aj, A+Aj, -A+Aj, - A+Aj, A-Aj, A-Aj, -A-Aj, -A-Aj, A-Aj, A-Aj, A-Aj, A+Aj, A+Aj, -A+Aj, -A-Aj, A-Aj, -A-Aj, -A+Aj, A-Aj, -A-Aj, A+Aj, -A+Aj, -A+Aj, -A-Aj. A+Aj, -A-Aj, A+Aj, A+Aj, A-Aj |
| | Polarization 2 | A-Aj, -A+Aj, A+Aj, -A+Aj, A+Aj, -A+Aj, -A+Aj, -A-Aj, -A+Aj, A+Aj, -A-Aj, A+Aj, A+Aj, -A-Aj, A-Aj, A+Aj, A-Aj, A+Aj, -A+Aj, -A-Aj, A-Aj, A-Aj, A-Aj, -A+Aj, -A-Aj, A-Aj, -A-Aj, A+Aj, -A+Aj, A+Aj, A+Aj, -A-Aj, -A-Aj, A-Aj, A-Aj, -A-Aj, -A-Aj, -A-Aj, -A+Aj, -A+Aj, A+Aj, A-Aj, -A-Aj, A-Aj, A+Aj, - A-Aj, A-Aj, -A+Aj, A+Aj, A+Aj, A-Aj, -A+Aj, A-Aj, -A+Aj, -A+Aj, -A-Aj |
| 11 | Polarization 1 | -A+Aj, A-Aj, -A-Aj, A-Aj, -A-Aj, A-Aj, A-Aj, A+Aj, A-Aj, -A-Aj, A+Aj, -A-Aj, -A-Aj, A+Aj, -A+Aj, -A-Aj, -A+Aj, -A-Aj, A-Aj, A+Aj, -A+Aj, -A+Aj, -A+Aj, A-Aj, A+Aj, -A+Aj, A+Aj, -A-Aj, A-Aj, -A-Aj, -A-Aj, A+Aj, A+Aj, -A+Aj, -A+Aj, A+Aj, A+Aj, A+Aj, A-Aj, A-Aj, -A-Aj, -A+Aj, A+Aj, -A+Aj, -A-Aj, A+Aj, -A+Aj, A-Aj, -A-Aj, -A-Aj, -A+Aj, A-Aj, -A+Aj, A-Aj, A-Aj, A+Aj |
| | Polarization 2 | A+Aj, -A-Aj, A-Aj, -A-Aj, A-Aj, -A-Aj, -A-Aj, -A+Aj, -A-Aj, A-Aj, -A+Aj, A-Aj, A-Aj, -A+Aj, A+Aj, A-Aj, A+Aj, A-Aj, -A-Aj, -A+Aj, A+Aj, A+Aj, A+Aj, -A-Aj, -A+Aj, A+Aj, -A+Aj, A-Aj, -A-Aj, A-Aj, A-Aj, -A+Aj, -A+Aj, A+Aj, A+Aj, -A+Aj, -A+Aj, -A+Aj, -A-Aj, -A-Aj, A-Aj, A+Aj, -A+Aj, A+Aj, A-Aj, - A+Aj, A+Aj, -A-Aj, A-Aj, A-Aj, A+Aj, -A-Aj, A+Aj, -A-Aj, -A-Aj, -A+Aj |
| 12 | Polarization 1 | A-Aj, -A+Aj, A+Aj, -A+Aj, A+Aj, -A+Aj, -A+Aj, -A-Aj, -A+Aj, A+Aj, -A-Aj, A+Aj, A+Aj, -A-Aj, A-Aj, A+Aj, A-Aj, A+Aj, -A+Aj, -A-Aj, A-Aj, A-Aj, A-Aj, -A+Aj, -A-Aj, A-Aj, -A-Aj, A+Aj, -A+Aj, A+Aj, A+Aj, -A-Aj, -A-Aj, A-Aj, A-Aj, -A-Aj, -A-Aj, -A-Aj, -A+Aj, -A+Aj, A+Aj, A-Aj, -A-Aj, A-Aj, A+Aj, - A-Aj, A-Aj, -A+Aj, A+Aj, A+Aj, A-Aj, -A+Aj, A-Aj, -A+Aj, -A+Aj, -A-Aj |
| | Polarization 2 | A+Aj, -A-Aj, A-Aj, -A-Aj, A-Aj, -A-Aj, -A-Aj, -A+Aj, -A-Aj, A-Aj, -A+Aj, A-Aj, A-Aj, -A+Aj, A+Aj, A-Aj, A+Aj, A-Aj, -A-Aj, -A+Aj, A+Aj, A+Aj, A+Aj, -A-Aj, -A+Aj, A+Aj, -A+Aj, A-Aj, -A-Aj, A-Aj, A-Aj, -A+Aj, -A+Aj, A+Aj, A+Aj, -A+Aj, -A+Aj, -A+Aj, -A-Aj, -A-Aj, A-Aj, A+Aj, -A+Aj, A+Aj, A-Aj, - A+Aj, A+Aj, -A-Aj, A-Aj, A-Aj, A+Aj, -A-Aj, A+Aj, -A-Aj, -A-Aj, -A+Aj |
| 13 | Polarization 1 | -A-Aj, A-Aj, A-Aj, -A+Aj, A-Aj, -A+Aj, A+Aj, A+Aj, A-Aj, -A+Aj, -A-Aj, A+Aj, -A+Aj, -A-Aj, -A+Aj, A+Aj, A-Aj, A-Aj, -A-Aj, -A-Aj, -A-Aj, -A+Aj, A+Aj, -A-Aj, -A-Aj, A+Aj, A+Aj, A-Aj, A+Aj, -A-Aj, - A+Aj, -A-Aj, A-Aj, -A+Aj, -A+Aj, -A+Aj, -A-Aj, A-Aj, A+Aj, -A+Aj, A+Aj, -A+Aj, -A-Aj, A+Aj, A+Aj, -A-Aj, A+Aj, A-Aj, -A-Aj, A-Aj, A-Aj, A+Aj, A-Aj, A+Aj, A-Aj, -A+Aj |
| | Polarization 2 | -A+Aj, A+Aj, A+Aj, -A-Aj, A+Aj, -A-Aj, A-Aj, A-Aj, A+Aj, -A-Aj, -A+Aj, A-Aj, -A-Aj, -A+Aj, -A-Aj, A-Aj, A+Aj, A+Aj, -A+Aj, -A+Aj, -A+Aj, -A-Aj, -A-Aj, -A+Aj, A+Aj, A-Aj, A-Aj, A+Aj, A-Aj, -A+Aj, - A-Aj, -A+Aj, A+Aj, -A-Aj, -A-Aj, -A-Aj, -A+Aj, A+Aj, A-Aj, -A-Aj, A-Aj, -A-Aj, -A+Aj, A-Aj, A-Aj, - A+Aj, A-Aj, A+Aj, -A+Aj, A+Aj, A+Aj, A-Aj, A+Aj, A-Aj, A+Aj, -A-Aj |

(continued)

| Index | Polarization | Pilot sequence |
|---|---|---|
| 14 | Polarization 1 | -A-Aj, A-Aj, A-Aj, -A+Aj, A-Aj, -A+Aj, A+Aj, A+Aj, A-Aj, -A+Aj, -A-Aj, A+Aj, -A+Aj, -A-Aj, -A+Aj, A+Aj, A-Aj, A-Aj, -A-Aj, -A-Aj, -A-Aj, -A+Aj, -A+Aj, -A-Aj, -A-Aj, A+Aj, A+Aj, A-Aj, A+Aj, -A-Aj, - A+Aj, -A-Aj, A-Aj, -A+Aj, -A+Aj, -A+Aj, -A-Aj, A-Aj, A+Aj, -A+Aj, A+Aj, -A+Aj, -A-Aj, A+Aj, A+Aj, -A-Aj, A+Aj, A-Aj, -A-Aj, A-Aj, A-Aj, A+Aj, A-Aj, A+Aj, A-Aj, -A+Aj |
| | Polarization 2 | A-Aj, -A-Aj, -A-Aj, A+Aj, -A-Aj, A+Aj, -A+Aj, -A+Aj, -A-Aj, A+Aj, A-Aj, -A+Aj, A+Aj, A-Aj, A+Aj, - A+Aj, -A-Aj, -A-Aj, A-Aj, A-Aj, A-Aj, A+Aj, A+Aj, A-Aj, A-Aj, -A+Aj, -A+Aj, -A-Aj, -A+Aj, A-Aj, A+Aj, A-Aj, -A-Aj, A+Aj, A+Aj, A+Aj, A-Aj, -A-Aj, -A+Aj, A+Aj, -A+Aj, A+Aj, A-Aj, -A+Aj, -A+Aj, A-Aj, -A+Aj, -A-Aj, A-Aj, -A-Aj, -A+Aj, -A-Aj, -A+Aj, -A-Aj, A+Aj |
| 15 | Polarization 1 | -A+Aj, A+Aj, A+Aj, -A-Aj, A+Aj, -A-Aj, A-Aj, A-Aj, A+Aj, -A-Aj, -A+Aj, A-Aj, -A-Aj, -A+Aj, -A-Aj, A-Aj, A+Aj, A+Aj, -A+Aj, -A+Aj, -A+Aj, -A-Aj, -A-Aj, -A+Aj, -A+Aj, A-Aj, A-Aj, A+Aj, A-Aj, -A+Aj, - A-Aj, -A+Aj, A+Aj, -A-Aj, -A-Aj, -A-Aj, -A+Aj, A+Aj, A-Aj, -A-Aj, A-Aj, -A-Aj, -A+Aj, A-Aj, A-Aj, - A+Aj, A-Aj, A+Aj, -A+Aj, A+Aj, A+Aj, A-Aj, A+Aj, A-Aj, A+Aj, -A-Aj |
| | Polarization 2 | A+Aj, -A+Aj, -A+Aj, A-Aj, -A+Aj, A-Aj, -A-Aj, -A-Aj, -A+Aj, A-Aj, A+Aj, -A-Aj, A-Aj, A+Aj, A-Aj, - A-Aj, -A+Aj, -A+Aj, A+Aj, A+Aj, A+Aj, A-Aj, A-Aj, A+Aj, A+Aj, -A-Aj, -A-Aj, -A+Aj, -A-Aj, A+Aj, A-Aj, A+Aj, -A+Aj, A-Aj, A-Aj, A-Aj, A+Aj, -A+Aj, -A-Aj, A-Aj, -A-Aj, A-Aj, A+Aj, -A-Aj, -A-Aj, A+Aj, - A-Aj, -A+Aj, A+Aj, -A+Aj, -A+Aj, -A-Aj, -A+Aj, -A-Aj, -A+Aj, A-Aj |
| 16 | Polarization 1 | A-Aj, -A-Aj, -A-Aj, A+Aj, -A-Aj, A+Aj, -A+Aj, -A+Aj, -A-Aj, A+Aj, A-Aj, -A+Aj, A+Aj, A-Aj, A+Aj, - A+Aj, -A-Aj, -A-Aj, A-Aj, A-Aj, A-Aj, A+Aj, A+Aj, A-Aj, A-Aj, -A+Aj, -A+Aj, -A-Aj, -A+Aj, A-Aj, A+Aj, A-Aj, -A-Aj, A+Aj, A+Aj, A+Aj, A-Aj, -A-Aj, -A+Aj, A+Aj, -A+Aj, A+Aj, A-Aj, -A+Aj, -A+Aj, A-Aj, -A+Aj, -A-Aj, A-Aj, -A-Aj, -A+Aj, -A-Aj, -A-Aj, -A+Aj, -A-Aj, -A+Aj, -A-Aj, A+Aj |
| | Polarization 2 | A+Aj, -A+Aj, -A+Aj, A-Aj, -A+Aj, A-Aj, -A-Aj, -A-Aj, -A+Aj, A-Aj, A+Aj, -A-Aj, A-Aj, A+Aj, A-Aj, - A-Aj, -A+Aj, -A+Aj, A+Aj, A+Aj, A+Aj, A-Aj, A-Aj, A+Aj, A+Aj, -A-Aj, -A-Aj, -A+Aj, -A-Aj, A+Aj, A-Aj, A+Aj, -A+Aj, A-Aj, A-Aj, A-Aj, A+Aj, -A+Aj, -A-Aj, A-Aj, -A-Aj, A-Aj, A+Aj, -A-Aj, -A-Aj, A+Aj, - A-Aj, -A+Aj, A+Aj, -A+Aj, -A+Aj, -A-Aj, -A+Aj, -A-Aj, -A+Aj, A-Aj |
| 17 | Polarization 1 | -A-Aj, -A+Aj, A-Aj, -A-Aj, A-Aj, -A-Aj, -A+Aj, -A+Aj, A+Aj, A-Aj, -A+Aj, A-Aj, A-Aj, A-Aj, -A-Aj, A-Aj, A+Aj, A-Aj, -A-Aj, A-Aj, A-Aj, -A-Aj, -A+Aj, A+Aj, -A+Aj, -A-Aj, -A-Aj, -A+Aj, -A-Aj, -A-Aj, - A+Aj, A+Aj, -A-Aj, A-Aj, -A+Aj, A-Aj, -A+Aj, -A+Aj, A+Aj, A+Aj, A+Aj, A+Aj, -A+Aj, A+Aj, -A+Aj, - A-Aj, A+Aj, -A+Aj, A+Aj, A-Aj, A+Aj, -A-Aj, -A-Aj, A+Aj, A+Aj, -A-Aj |
| | Polarization 2 | A-Aj, A-Aj, A+Aj, -A+Aj, -A-Aj, A+Aj, A-Aj, A+Aj, -A+Aj, -A+Aj, A-Aj, A+Aj, A+Aj, A-Aj, A-Aj, A+Aj, A+Aj, -A+Aj, -A+Aj, -A-Aj, A-Aj, -A+Aj, -A-Aj, A+Aj, A+Aj, A-Aj, -A-Aj, -A+Aj, -A+Aj, -A-Aj, A-Aj, A-Aj, -A-Aj, -A-Aj, -A+Aj, -A-Aj, A+Aj, -A+Aj, -A-Aj, A-Aj, -A-Aj, A-Aj, A-Aj, -A-Aj, A+Aj, - A+Aj, A+Aj, -A+Aj, A+Aj, A+Aj, A-Aj, -A+Aj, -A-Aj, -A-Aj, -A-Aj, -A+Aj |
| 18 | Polarization 1 | -A-Aj, A+Aj, A+Aj, -A-Aj, -A-Aj, A+Aj, -A+Aj, A+Aj, A-Aj, A+Aj, -A-Aj, A-Aj, A+Aj, A-Aj, A+Aj, A+Aj, A+Aj, A+Aj, A-Aj, A-Aj, -A+Aj, A-Aj, -A+Aj, -A-Aj, A+Aj, A-Aj, -A-Aj, -A-Aj, A-Aj, -A-Aj, -A-Aj, A-Aj, A+Aj, A-Aj, -A-Aj, -A+Aj, -A+Aj, -A+Aj, -A+Aj, A+Aj, -A+Aj, -A-Aj, -A+Aj, -A+Aj, -A+Aj, A-Aj, -A+Aj, A+Aj, A-Aj, A-Aj, -A-Aj. -A+Aj, -A-Aj, -A+Aj, A-Aj, -A-Aj |
| | Polarization 2 | A-Aj, -A-Aj, -A-Aj, -A-Aj, A-Aj, -A+Aj, A+Aj, A+Aj, A-Aj, A+Aj, A-Aj, A+Aj, -A-Aj, -A+Aj, -A+Aj, - A-Aj, -A+Aj, -A-Aj, A-Aj, A+Aj, -A-Aj, A-Aj, -A-Aj, -A-Aj, -A+Aj, -A+Aj, -A-Aj, A-Aj, A-Aj, -A-Aj, - A+Aj, A+Aj, A+Aj, -A-Aj, A-Aj, -A+Aj, -A-Aj, A-Aj, A-Aj, A+Aj, A+Aj, -A+Aj, -A+Aj, A+Aj, A+Aj, - A+Aj, A-Aj, A-Aj, A+Aj, -A+Aj, A+Aj, -A-Aj, A-Aj, A+Aj, -A+Aj, -A+Aj |

**Table 9-2**

| Index | Polarization | Pilot sequence |
|---|---|---|
| 1 | Polarization 1 | -A+Aj, A+Aj, -A+Aj, A+Aj, -A-Aj, A+Aj, A+Aj, -A-Aj, -A-Aj, A-Aj, -A-Aj, -A-Aj, A-Aj, A-Aj, -A+Aj, - A+Aj, -A+Aj, A-Aj, -A+Aj, -A-Aj, A+Aj, -A-Aj, -A+Aj, -A-Aj, A-Aj, -A-Aj, A-Aj, A+Aj, -A+Aj, A-Aj, A-Aj, -A+Aj, A+Aj, -A-Aj, -A+Aj, A-Aj, A+Aj, A+Aj, -A+Aj, -A-Aj, -A+Aj, A+Aj, A+Aj, -A-Aj, A-Aj, A+Aj, A+Aj, A+Aj, -A+Aj, A-Aj, -A-Aj, -A-Aj, -A-Aj, A+Aj, A-Aj, A-Aj |
| 1 | Polarization 2 | -A-Aj, A-Aj, -A-Aj, A-Aj, -A+Aj, A-Aj, A-Aj, -A+Aj, -A+Aj, A+Aj, -A+Aj, -A+Aj, A+Aj, A+Aj, -A-Aj, -A-Aj, -A-Aj, A+Aj, -A-Aj, -A+Aj, A-Aj, -A+Aj, -A-Aj, -A+Aj, A+Aj, -A+Aj, A+Aj, A-Aj, -A-Aj, A+Aj, A+Aj, -A-Aj, A-Aj, -A+Aj, -A-Aj, A+Aj, A-Aj, A-Aj, -A-Aj, -A+Aj, -A-Aj, A-Aj, A-Aj, -A+Aj, A+Aj, A-Aj, A-Aj, A-Aj, -A-Aj, A+Aj, -A+Aj, -A+Aj, -A+Aj, A-Aj, A+Aj, A+Aj |
| 2 | Polarization 1 | -A+Aj, A+Aj, -A+Aj, A+Aj, -A-Aj, A+Aj, A+Aj, -A-Aj, -A-Aj, A-Aj, -A-Aj, -A-Aj, A-Aj, A-Aj, -A+Aj, - A+Aj, -A+Aj, A-Aj, -A+Aj, -A-Aj, A+Aj, -A-Aj, -A+Aj, -A-Aj, A-Aj, -A-Aj, A-Aj, A+Aj, -A+Aj, A-Aj, A-Aj, -A+Aj, A+Aj, -A-Aj, -A+Aj, A-Aj, A+Aj, A+Aj, -A+Aj, A-Aj, -A-Aj, -A-Aj, -A-Aj, A+Aj, A-Aj, A-Aj |
| 2 | Polarization 2 | A+Aj, -A+Aj, A+Aj, -A+Aj, A-Aj, -A+Aj, -A+Aj, A-Aj, A-Aj, -A-Aj, A-Aj, A-Aj, -A-Aj, -A-Aj, A+Aj, A+Aj, A+Aj, -A-Aj, A+Aj, A-Aj, -A+Aj. A-Aj, A+Aj, A-Aj, -A-Aj, A-Aj, -A-Aj, -A+Aj, A+Aj, -A-Aj, -A-Aj, A+Aj, -A+Aj, A-Aj, A+Aj, -A-Aj, -A+Aj, -A+Aj, A+Aj, A-Aj, A+Aj, -A+Aj, -A+Aj, A-Aj, -A-Aj, -A+Aj, - A+Aj, -A+Aj, A+Aj, -A-Aj, A-Aj, A-Aj, A-Aj, -A+Aj, -A-Aj, -A-Aj |
| 3 | Polarization 1 | A-Aj, -A-Aj, A-Aj, -A-Aj, A+Aj, -A-Aj, -A-Aj, A+Aj, A+Aj, -A+Aj, A+Aj, A+Aj, -A+Aj, -A+Aj, A-Aj, A-Aj, A-Aj, -A+Aj, A-Aj, A+Aj, -A-Aj, A+Aj, A-Aj, A+Aj, -A+Aj, A+Aj, -A+Aj, -A-Aj, A-Aj, -A+Aj, -A+Aj, A-Aj, -A-Aj, A+Aj, A-Aj, -A+Aj, -A-Aj, -A-Aj, A-Aj, A+Aj, A-Aj, -A-Aj, -A-Aj, A+Aj, -A+Aj, -A-Aj, -A-Aj, -A-Aj, A-Aj, -A+Aj, A+Aj, A+Aj, A+Aj, -A-Aj, -A+Aj, -A+Aj |
| 3 | Polarization 2 | -A-Aj, A-Aj, -A-Aj, A-Aj, -A+Aj, A-Aj, A-Aj, -A+Aj, -A+Aj, A+Aj, -A+Aj, -A+Aj, A+Aj, A+Aj, -A-Aj, -A-Aj, -A-Aj, A+Aj, -A-Aj, -A+Aj, A-Aj, -A+Aj, -A-Aj, -A+Aj, A+Aj, -A+Aj, A+Aj, A-Aj, -A-Aj, A+Aj, A+Aj, -A-Aj, A-Aj, -A+Aj, -A-Aj, A+Aj, A-Aj, A-Aj, -A-Aj, -A+Aj, -A-Aj, A-Aj, A-Aj, -A+Aj, A+Aj, A-Aj, A-Aj, A-Aj, -A-Aj, A+Aj, -A+Aj, -A+Aj, -A+Aj, A-Aj, A+Aj, A+Aj |
| 4 | Polarization 1 | A-Aj, -A-Aj, A-Aj, -A-Aj, A+Aj, -A-Aj, -A-Aj, A+Aj, A+Aj, -A+Aj, A+Aj, A+Aj, -A+Aj, -A+Aj, A-Aj, A-Aj, A-Aj, -A+Aj, A-Aj, A+Aj, -A-Aj, A+Aj, A-Aj, A+Aj, -A+Aj, A+Aj, -A+Aj, -A-Aj, A-Aj, -A+Aj, -A+Aj, A-Aj, -A-Aj, A+Aj, A-Aj, -A+Aj, -A-Aj, -A-Aj, A-Aj, A+Aj, A-Aj, -A-Aj, -A-Aj, A+Aj, -A+Aj, -A-Aj, -A-Aj, -A-Aj, A-Aj, -A+Aj, A+Aj, A+Aj, A+Aj, -A-Aj, -A+Aj, -A+Aj |
| 4 | Polarization 2 | A+Aj, -A+Aj, A+Aj, -A+Aj, A-Aj, -A+Aj, -A+Aj, A-Aj, A-Aj, -A-Aj, A-Aj, A-Aj, -A-Aj, -A-Aj, A+Aj, A+Aj, A+Aj, -A-Aj, A+Aj, A-Aj, -A+Aj. A-Aj, A+Aj, A-Aj, -A-Aj, A-Aj, -A-Aj, -A+Aj, A+Aj, -A-Aj, -A-Aj, A+Aj, -A+Aj, A-Aj, A+Aj, -A-Aj, -A+Aj, -A+Aj, A+Aj, A-Aj, A+Aj, -A+Aj, -A+Aj, A-Aj, -A-Aj, -A+Aj, - A+Aj, -A+Aj, A+Aj, -A-Aj, A-Aj, A-Aj, A-Aj, -A+Aj, -A-Aj, -A-Aj |
| 5 | Polarization 1 | -A+Aj, -A+Aj, A+Aj, -A-Aj, -A-Aj, -A-Aj, -A+Aj, A-Aj, A+Aj, A+Aj, A+Aj, -A+Aj, -A-Aj, A+Aj, A+Aj, A-Aj, -A-Aj, A-Aj, A+Aj, A+Aj, -A+Aj, A-Aj, -A-Aj, A+Aj, A-Aj, -A+Aj, -A+Aj, A-Aj, A+Aj, -A+Aj, -A-Aj, - A+Aj, -A-Aj, A-Aj, -A-Aj, A+Aj, -A-Aj, A-Aj, -A+Aj, A-Aj, A-Aj, A-Aj, -A+Aj, -A+Aj, -A-Aj, -A-Aj, - A+Aj, -A-Aj, -A-Aj, A+Aj, A+Aj, -A-Aj, A+Aj, A-Aj, A+Aj, A-Aj |
| 5 | Polarization 2 | -A-Aj, -A-Aj, A-Aj, -A+Aj, -A+Aj, -A+Aj, -A-Aj, A+Aj, A-Aj, A-Aj, A-Aj, -A-Aj, -A+Aj, A-Aj, A-Aj, A+Aj, -A+Aj, A+Aj, A-Aj, A-Aj, -A-Aj, A+Aj, -A+Aj, A-Aj, A+Aj, -A-Aj, -A-Aj, A+Aj, A-Aj, -A-Aj, - A+Aj, -A-Aj, -A+Aj, A+Aj, -A+Aj, A-Aj, -A+Aj, A+Aj, -A-Aj, A+Aj, A+Aj, A+Aj, -A-Aj, -A-Aj, -A+Aj, - A+Aj, -A-Aj, -A+Aj, -A+Aj, A-Aj, A-Aj, -A+Aj, A-Aj, A+Aj, A-Aj, A+Aj |
| 6 | Polarization 1 | -A+Aj, -A+Aj, A+Aj, -A-Aj, -A-Aj, -A-Aj, -A+Aj, A-Aj, A+Aj, A+Aj, A+Aj, -A+Aj, -A-Aj, A+Aj, A+Aj, A-Aj, -A-Aj, A-Aj, A+Aj, A+Aj, -A+Aj, A-Aj, -A-Aj, A+Aj, A-Aj, -A+Aj, -A+Aj, A-Aj, A+Aj, -A+Aj, -A-Aj, - A+Aj, -A-Aj, A-Aj, -A-Aj, A+Aj, -A-Aj, A-Aj, -A+Aj, A-Aj, A-Aj, A-Aj, -A+Aj, -A+Aj, -A-Aj, -A-Aj, - A+Aj, -A-Aj, -A-Aj, A+Aj, A+Aj, -A-Aj, A+Aj, A-Aj, A+Aj, A-Aj |
| 6 | Polarization 2 | A+Aj, A+Aj, -A+Aj, A-Aj, A-Aj, A-Aj, A+Aj, -A-Aj, -A+Aj, -A+Aj, -A+Aj, A+Aj, A-Aj, -A+Aj, -A+Aj, -A-Aj, A-Aj, -A-Aj, -A+Aj, A+Aj, A+Aj, -A-Aj, A-Aj, -A+Aj, -A-Aj, A+Aj, A+Aj, -A-Aj, -A+Aj, A+Aj, A-Aj, A+Aj, A-Aj, -A-Aj, A-Aj, -A+Aj, A-Aj, -A-Aj, A+Aj, -A-Aj, -A-Aj, -A-Aj, A+Aj, A+Aj, A-Aj, A-Aj, A+Aj, A-Aj, A-Aj, -A+Aj, -A+Aj, A-Aj, -A+Aj, -A-Aj, -A+Aj, -A-Aj |

(continued)

| Index | Polarization | Pilot sequence |
|---|---|---|
| 7 | Polarization 1 | A-Aj, A-Aj, -A-Aj, A+Aj, A+Aj, A+Aj, A-Aj, -A+Aj, -A-Aj, -A-Aj, -A-Aj, A-Aj, A+Aj, -A-Aj, -A-Aj, - A+Aj, A+Aj, -A+Aj, -A-Aj, -A-Aj, A-Aj, -A+Aj, A+Aj, -A-Aj, -A+Aj, A-Aj, A-Aj, -A+Aj, -A-Aj, A-Aj, A+Aj, A-Aj, A+Aj, -A+Aj, A+Aj, -A-Aj. A+Aj, -A+Aj, A-Aj, -A+Aj, -A+Aj, -A+Aj, A-Aj, A-Aj, A+Aj, A+Aj, A-Aj, A+Aj, A+Aj, -A-Aj, -A-Aj, A+Aj, -A-Aj, -A+Aj, -A-Aj, -A+Aj |
|  | Polarization 2 | -A-Aj, -A-Aj, A-Aj, -A+Aj, -A+Aj, -A+Aj, -A-Aj, A+Aj, A-Aj, A-Aj, A-Aj, -A-Aj, -A+Aj, A-Aj, A-Aj, A+Aj, -A+Aj, A+Aj, A-Aj, A-Aj, -A-Aj, A+Aj, -A+Aj, A-Aj, A+Aj, -A-Aj, -A-Aj, A+Aj, A-Aj, -A-Aj, - A+Aj, -A-Aj, -A+Aj, A+Aj, -A+Aj, A-Aj, -A+Aj, A+Aj, -A-Aj, A+Aj, A+Aj, A+Aj, -A-Aj, -A-Aj, -A+Aj, - A+Aj, -A-Aj, -A+Aj, -A+Aj, A-Aj, A-Aj, -A+Aj, A-Aj, A+Aj, A-Aj, A+Aj |
| 8 | Polarization 1 | A-Aj, A-Aj, -A-Aj, A+Aj, A+Aj, A+Aj, A-Aj, -A+Aj, -A-Aj, -A-Aj, -A-Aj, A-Aj, A+Aj, -A-Aj, -A-Aj, - A+Aj, A+Aj, -A+Aj, -A-Aj, -A-Aj, A-Aj, -A+Aj, A+Aj, -A-Aj, -A+Aj, A-Aj, A-Aj, -A+Aj, -A-Aj, A-Aj, A+Aj, A-Aj, A+Aj, -A+Aj, A+Aj, -A-Aj. A+Aj, -A+Aj, A-Aj, -A+Aj, -A+Aj, -A+Aj, A-Aj, A-Aj, A+Aj, A+Aj, A-Aj, A+Aj, A+Aj, -A-Aj, -A-Aj, A+Aj, -A-Aj, -A+Aj, -A-Aj, -A+Aj |
|  | Polarization 2 | A+Aj, A+Aj, -A+Aj, A-Aj, A-Aj, A-Aj, A+Aj, -A-Aj, -A+Aj, -A+Aj, -A+Aj, A+Aj, A-Aj, -A+Aj, -A+Aj, -A-Aj, A-Aj, -A-Aj, -A+Aj, -A+Aj, A+Aj, -A-Aj, A-Aj, -A+Aj, -A-Aj, A+Aj, A+Aj, -A-Aj, -A+Aj, A+Aj, A-Aj, A+Aj, A-Aj, A-Aj, -A+Aj, -A+Aj, A-Aj, -A+Aj, -A-Aj, -A+Aj, -A-Aj |
| 9 | Polarization 1 | -A-Aj, -A+Aj, A+Aj, A+Aj, -A-Aj, A+Aj, A-Aj, A+Aj, -A-Aj, A+Aj, -A+Aj, -A-Aj, A-Aj, A-Aj, A-Aj, - A+Aj, -A-Aj, A+Aj, -A-Aj, A+Aj, -A+Aj, A-Aj, -A+Aj, A+Aj, A+Aj, A+Aj, A+Aj, A-Aj, -A+Aj, -A-Aj, A+Aj, -A+Aj, A-Aj, A+Aj, -A-Aj, A-Aj, A-Aj, -A+Aj, -A+Aj, -A-Aj, -A+Aj, -A-Aj, A+Aj, -A+Aj, -A-Aj, - A-Aj, -A+Aj, A+Aj, -A-Aj, A-Aj, -A-Aj, -A+Aj, A-Aj, A-Aj, -A-Aj, A-Aj |
|  | Polarization 2 | -A+Aj, -A-Aj, -A+Aj, A+Aj, A+Aj, -A+Aj, A-Aj, -A-Aj, -A+Aj, A+Aj, A-Aj, A+Aj, A-Aj, -A+Aj, -A+Aj, A+Aj, A-Aj, A-Aj, A-Aj, A-Aj, -A+Aj, A-Aj, -A-Aj, -A+Aj, A-Aj, A+Aj, -A+Aj, -A-Aj, A-Aj, -A-Aj, -A+Aj, -A-Aj, -A+Aj, -A+Aj, A+Aj, A-Aj, -A-Aj, -A+Aj, A+Aj, -A-Aj, -A-Aj, A+Aj, -A-Aj, A+Aj, -A-Aj, A+Aj, A+Aj, -A+Aj, -A-Aj, A-Aj, -A+Aj, -A-Aj, A-Aj, A+Aj, A-Aj, A-Aj |
| 10 | Polarization 1 | -A+Aj, A+Aj, A+Aj, -A-Aj, A+Aj, A-Aj. A+Aj, -A-Aj, A+Aj, -A+Aj, -A-Aj, A-Aj, A-Aj, A-Aj, -A+Aj, -A-Aj, A+Aj, -A-Aj, A+Aj, -A+Aj, A-Aj, -A+Aj, A+Aj, A+Aj, A+Aj, A+Aj, A-Aj, -A+Aj, -A-Aj, A+Aj, -A+Aj, A-Aj, A+Aj, -A-Aj, A-Aj, A-Aj, -A+Aj, -A+Aj, -A-Aj, -A+Aj, -A-Aj, A+Aj, -A+Aj, -A-Aj, -A-Aj, -A+Aj, A+Aj, -A-Aj, A-Aj, -A-Aj, -A+Aj, A-Aj, A-Aj, -A-Aj, A-Aj, -A-Aj |
|  | Polarization 2 | -A+Aj, -A-Aj, -A+Aj, A+Aj, A+Aj, -A+Aj, A-Aj, -A-Aj, -A+Aj, A+Aj, A-Aj, A+Aj, A-Aj, -A+Aj, -A+Aj, A+Aj, A-Aj, A-Aj, A-Aj, A-Aj, -A+Aj, A-Aj, -A-Aj, -A+Aj, A-Aj, A+Aj, -A+Aj, -A-Aj, A-Aj, -A-Aj, -A+Aj, -A-Aj, -A+Aj, -A+Aj, A+Aj, A-Aj, -A-Aj, -A+Aj, A+Aj, -A-Aj, -A-Aj, A+Aj, -A-Aj, A+Aj, -A-Aj, A+Aj, A+Aj, -A+Aj, -A-Aj, A-Aj, -A+Aj, -A-Aj, A-Aj, A-Aj |
| 11 | Polarization 1 | -A-Aj, -A+Aj, -A-Aj, -A+Aj, -A+Aj, A-Aj, -A-Aj, -A+Aj, -A-Aj, A+Aj, A-Aj, -A-Aj, -A-Aj, A-Aj, A+Aj, -A-Aj, A-Aj, -A-Aj, A-Aj, A-Aj, -A+Aj, -A+Aj, -A-Aj, A+Aj, -A+Aj, A-Aj, A+Aj, -A-Aj, A-Aj, -A+Aj, A+Aj, A+Aj, A+Aj, A+Aj, A-Aj, -A+Aj, A-Aj, A+Aj, -A-Aj, A+Aj, -A-Aj, A-Aj, -A+Aj, -A+Aj, -A+Aj, -A-Aj, A-Aj, A+Aj, -A-Aj, A+Aj, -A+Aj, A+Aj, -A-Aj, A+Aj, A+Aj, A-Aj |
|  | Polarization 2 | -A+Aj, -A+Aj, A+Aj, -A+Aj, -A-Aj, A-Aj, -A+Aj, -A-Aj, A-Aj, A+Aj, A+Aj, -A-Aj, A+Aj, -A-Aj, A+Aj, -A-Aj, -A-Aj, A+Aj, A-Aj, -A-Aj, -A+Aj, A+Aj, A-Aj, A-Aj, -A-Aj, A-Aj, -A-Aj, -A+Aj, -A-Aj, A-Aj, A-Aj, A+Aj, - A+Aj, A-Aj, -A-Aj, -A+Aj, A-Aj, -A+Aj, -A+Aj, -A+Aj, -A+Aj, A+Aj, A-Aj, A-Aj, -A+Aj, A+Aj, -A+Aj, A+Aj, A-Aj, -A-Aj, -A+Aj, A-Aj, A+Aj, A+Aj, A-Aj, -A-Aj, A-Aj |
| 12 | Polarization 1 | -A+Aj, -A-Aj, -A+Aj, -A+Aj, A-Aj, -A-Aj, -A+Aj, -A-Aj, A+Aj, A-Aj, -A-Aj, -A-Aj, A-Aj, A+Aj, -A-Aj, A-Aj, -A-Aj, A-Aj, A-Aj, -A+Aj, -A+Aj, -A-Aj, A+Aj, -A+Aj, A-Aj, A+Aj, -A-Aj, A-Aj, -A+Aj, A+Aj, A+Aj, A+Aj, A+Aj, A-Aj, -A+Aj, A-Aj, A+Aj, -A-Aj, A+Aj, -A-Aj, A-Aj, -A+Aj, -A+Aj, -A+Aj, -A-Aj, A-Aj, A+Aj, -A-Aj, A+Aj, -A+Aj, A+Aj, -A-Aj, A+Aj, A+Aj, A-Aj, -A-Aj |
|  | Polarization 2 | -A+Aj, -A+Aj, A+Aj, -A+Aj, -A-Aj, A-Aj, -A+Aj, -A-Aj, A-Aj, A+Aj, A+Aj, -A-Aj, A+Aj, -A-Aj, A+Aj, -A-Aj, -A-Aj, A+Aj, A-Aj, -A-Aj, -A+Aj, A+Aj, A-Aj, A-Aj, -A-Aj, A-Aj, -A-Aj, -A+Aj, -A-Aj, A-Aj, A+Aj, - A+Aj, A-Aj, -A-Aj, -A+Aj, A-Aj, -A+Aj, -A+Aj, -A+Aj, -A+Aj, A+Aj, A-Aj, A-Aj, -A+Aj, A+Aj, -A+Aj, A+Aj, A-Aj, -A-Aj, -A+Aj, A+Aj, -A+Aj, A+Aj, A-Aj, -A-Aj, A-Aj, -A-Aj, A-Aj |

(3) It is assumed that $N_{PS} = 57$. If a remainder of $N_{TS}$ divided by 4 is 0, the pilot sequence is one item in the following Table 10-1. If a remainder of $N_{TS}$ divided by 4 is 2, the pilot sequence is one item in the following Table 10-1 or Table 10-2.

**Table 10-1**

| Index | Polarization | Pilot sequence |
|---|---|---|
| 1 | Polarization 1 | -A-Aj, -A+Aj, -A-Aj, A+Aj, A-Aj, A+Aj, A-Aj, A-Aj, -A+Aj, A+Aj, A+Aj, -A-Aj, -A-Aj, A-Aj, -A+Aj, - A+Aj, A-Aj, A-Aj, A+Aj, A-Aj, -A+Aj, A+Aj, -A-Aj, A-Aj, A+Aj, A+Aj, A-Aj, A-Aj, A-Aj, -A+Aj, -A-Aj, - A+Aj, A+Aj, -A+Aj, -A+Aj, A-Aj, -A+Aj, -A+Aj, -A+Aj, -A-Aj, -A-Aj, A+Aj, A-Aj, -A-Aj, -A-Aj, -A+Aj, - A-Aj, -A-Aj, -A-Aj, -A-Aj, A+Aj, -A+Aj. A-Aj, A+Aj, -A-Aj, A+Aj, A+Aj |
| | Polarization 2 | -A+Aj, -A-Aj, -A+Aj, A-Aj, A+Aj, A-Aj, A+Aj, A+Aj, -A-Aj, A-Aj, A-Aj, -A+Aj, -A+Aj, A+Aj, -A-Aj, -A-Aj, A+Aj, A+Aj, A-Aj, A+Aj, -A-Aj, A-Aj, -A+Aj, A+Aj, A-Aj, A-Aj, A+Aj, A+Aj, A+Aj, -A-Aj, -A+Aj, -A-Aj, A-Aj, -A-Aj, -A-Aj, A+Aj, -A-Aj, -A-Aj, -A-Aj, -A+Aj, -A+Aj, A-Aj, A+Aj, -A+Aj, -A+Aj, -A-Aj, - A+Aj, -A+Aj, -A+Aj, -A+Aj, A-Aj, -A-Aj, A+Aj, A-Aj, -A+Aj, A-Aj, A-Aj |
| 2 | Polarization 1 | -A-Aj, -A+Aj, -A-Aj, A+Aj, A-Aj, A+Aj, A-Aj, A-Aj, -A+Aj, A+Aj, A+Aj, -A-Aj, -A-Aj, A-Aj, -A+Aj, - A+Aj, A-Aj, A-Aj, A+Aj, A-Aj, -A+Aj, A+Aj, -A-Aj, A-Aj, A+Aj, A+Aj, A-Aj, A-Aj, A-Aj, -A+Aj, -A-Aj, - A+Aj, A+Aj, -A+Aj, -A+Aj, A-Aj, -A+Aj, -A+Aj, -A+Aj, -A-Aj, -A-Aj, A+Aj, A-Aj, -A-Aj, -A-Aj, -A+Aj, - A-Aj, -A-Aj, -A-Aj, -A-Aj, A+Aj, -A+Aj. A-Aj, A+Aj, -A-Aj, A+Aj, A+Aj |
| | Polarization 2 | A-Aj, A+Aj, A-Aj, -A+Aj, -A-Aj, -A+Aj, -A-Aj, -A-Aj, A+Aj, -A+Aj, -A+Aj, A-Aj, A-Aj, -A-Aj, A+Aj, A+Aj, -A-Aj, -A-Aj, -A+Aj, -A-Aj, A+Aj, -A+Aj, A-Aj, -A-Aj, -A+Aj, -A+Aj, -A-Aj, -A-Aj, -A-Aj, A+Aj, A-Aj, A+Aj, -A+Aj, A+Aj, A+Aj, -A-Aj, A+Aj, A+Aj, A+Aj, A-Aj, A-Aj, -A+Aj, -A-Aj, A-Aj, A-Aj, A+Aj, A-Aj, A-Aj, A-Aj, A-Aj, -A+Aj, A+Aj, -A-Aj, -A+Aj, A-Aj, -A+Aj, -A+Aj |
| 3 | Polarization 1 | -A+Aj, -A-Aj, -A+Aj, A-Aj, A+Aj, A-Aj, A+Aj, A+Aj, -A-Aj, A-Aj, A-Aj, -A+Aj, -A+Aj, A+Aj, -A-Aj, -A-Aj, A+Aj, A+Aj, A-Aj, A+Aj, -A-Aj, A-Aj, -A+Aj, A+Aj, A-Aj, A-Aj, A+Aj, A+Aj, A+Aj, -A-Aj, -A+Aj, -A-Aj, A-Aj, -A-Aj, -A-Aj, A+Aj, -A-Aj, -A-Aj, -A-Aj, -A+Aj, -A+Aj, A-Aj, A+Aj, -A+Aj, -A+Aj, -A-Aj, - A+Aj, -A+Aj, -A+Aj, -A+Aj, A-Aj, -A-Aj, A+Aj, A-Aj, -A+Aj, A-Aj, A-Aj |
| | Polarization 2 | A+Aj, A-Aj, A+Aj, -A-Aj, -A+Aj, -A-Aj, -A+Aj, -A+Aj, A-Aj, -A-Aj, -A-Aj, A+Aj, A+Aj, -A+Aj, A-Aj, A-Aj, -A+Aj, -A+Aj, -A-Aj, -A+Aj, A-Aj, -A-Aj, A+Aj, -A+Aj, -A-Aj, -A-Aj, -A+Aj, -A+Aj, -A+Aj, A-Aj, A+Aj, A-Aj, -A-Aj, A-Aj, A-Aj, -A+Aj, A-Aj, A-Aj, A-Aj, A+Aj, A+Aj, -A-Aj, -A+Aj, A+Aj, A+Aj, A-Aj, A+Aj, A+Aj, A+Aj, A+Aj, -A-Aj, A-Aj, -A+Aj, -A-Aj, A+Aj, -A-Aj, -A-Aj |
| 4 | Polarization 1 | A-Aj, A+Aj, A-Aj, -A+Aj, -A-Aj, -A+Aj, -A-Aj, -A-Aj, A+Aj, -A+Aj, -A+Aj, A-Aj, A-Aj, -A-Aj, A+Aj, A+Aj, -A-Aj, -A-Aj, -A+Aj, -A-Aj, A+Aj, -A+Aj, A-Aj, -A-Aj, -A+Aj, -A+Aj, -A-Aj, -A-Aj, -A-Aj, A+Aj, A-Aj, A+Aj, -A+Aj, A+Aj, A+Aj, A+Aj, -A-Aj, A+Aj, A+Aj, A+Aj, A-Aj, A-Aj, -A+Aj, -A-Aj, A-Aj, A-Aj, A+Aj, A-Aj, A-Aj, A-Aj, A-Aj, -A+Aj, A+Aj, -A-Aj, -A+Aj, A-Aj, -A+Aj, -A+Aj |
| | Polarization 2 | A+Aj, A-Aj, A+Aj, -A-Aj, -A+Aj, -A-Aj, -A+Aj, -A+Aj, A-Aj, -A-Aj, -A-Aj, A+Aj, A+Aj, -A+Aj, A-Aj, A-Aj, -A+Aj, -A+Aj, -A-Aj, -A+Aj, A-Aj, -A-Aj, A+Aj, -A+Aj, -A-Aj, -A-Aj, -A+Aj, -A+Aj, -A+Aj, A-Aj, A+Aj, A-Aj, -A-Aj, A-Aj, A-Aj, -A+Aj, A-Aj, A-Aj, A-Aj, A+Aj, A+Aj, -A-Aj, -A+Aj, A+Aj, A+Aj, A-Aj, A+Aj, A+Aj, A+Aj, A+Aj, -A-Aj, A-Aj, -A+Aj, -A-Aj, A+Aj, -A-Aj, -A-Aj |
| 5 | Polarization 1 | -A-Aj, A+Aj, A+Aj, -A-Aj, A+Aj, -A+Aj. A-Aj, A+Aj, -A-Aj, -A-Aj, -A-Aj, -A-Aj, A-Aj, -A-Aj, -A-Aj, - A+Aj, A+Aj, -A-Aj, -A-Aj, A-Aj, A-Aj, A-Aj, -A+Aj, A-Aj, A-Aj, A+Aj, A-Aj, -A-Aj, A-Aj, -A+Aj, -A+Aj, - A+Aj, A+Aj, A+Aj, -A+Aj, -A-Aj, A+Aj. A-Aj, -A+Aj, A+Aj, -A+Aj, -A+Aj, A-Aj, A-Aj, -A+Aj, -A-Aj, -A-Aj, A+Aj, A+Aj, A-Aj, -A+Aj, -A+Aj, A+Aj, -A+Aj, A+Aj, -A-Aj, A-Aj |
| | Polarization 2 | -A+Aj, A-Aj, A-Aj, -A+Aj, A-Aj, -A-Aj, A+Aj, A-Aj, -A+Aj, -A+Aj, -A+Aj, -A+Aj, A+Aj, -A+Aj, -A+Aj, - A-Aj, A-Aj, -A+Aj, -A+Aj, A+Aj, A+Aj, A+Aj, -A-Aj, A+Aj, A+Aj, A-Aj, A+Aj, -A+Aj, A+Aj, -A-Aj, -A-Aj, -A-Aj, A-Aj, A-Aj, -A-Aj, -A+Aj, A-Aj, A+Aj, -A-Aj, A-Aj, -A-Aj, -A-Aj, A+Aj, A+Aj, -A-Aj, -A+Aj, -A+Aj, A-Aj, A-Aj, A+Aj, -A-Aj, -A-Aj, A-Aj, -A-Aj, A-Aj, -A+Aj, A+Aj |
| 6 | Polarization 1 | -A-Aj, A+Aj, A+Aj, -A-Aj, A+Aj, -A+Aj. A-Aj, A+Aj, -A-Aj, -A-Aj, -A-Aj, A-Aj, A-Aj, -A-Aj, -A-Aj, - A+Aj, A+Aj, -A-Aj, -A-Aj, A-Aj, A-Aj, A-Aj, -A+Aj, A-Aj, A-Aj, A+Aj, A-Aj, -A-Aj, A-Aj, -A+Aj, -A+Aj, - A+Aj, A+Aj, A+Aj, -A+Aj, -A-Aj, A+Aj. A-Aj, -A+Aj, A+Aj, -A+Aj, -A+Aj, A-Aj, A-Aj, -A+Aj, -A-Aj, -A-Aj, A+Aj, A+Aj, A-Aj, -A+Aj, -A+Aj, A+Aj, -A+Aj, A+Aj, -A-Aj, A-Aj |
| | Polarization 2 | A-Aj, -A+Aj, -A+Aj, A-Aj, -A+Aj, A+Aj, -A-Aj, -A+Aj, A-Aj, A-Aj, A-Aj, A-Aj, -A-Aj, A-Aj, A-Aj, A+Aj, - A+Aj, A-Aj, A-Aj, -A+Aj, -A-Aj, -A-Aj, A+Aj, -A-Aj, -A-Aj, -A+Aj, -A-Aj, A-Aj, -A-Aj, A+Aj, A+Aj, A+Aj, -A+Aj, -A+Aj, A+Aj, A-Aj, -A+Aj, A-Aj, A+Aj, -A+Aj, A+Aj, A+Aj, -A-Aj, -A-Aj, A+Aj, A-Aj, A-Aj, - A+Aj, -A+Aj, -A-Aj, A+Aj, A+Aj, -A+Aj, A+Aj, -A+Aj, A-Aj, -A-Aj |

(continued)

| Index | Polarization | Pilot sequence |
|---|---|---|
| 7 | Polarization 1 | -A+Aj, A-Aj, A-Aj, -A+Aj, A-Aj, -A-Aj, A+Aj, A-Aj, -A+Aj, -A+Aj, -A+Aj, -A+Aj, A+Aj, -A+Aj, -A+Aj, - A-Aj, A-Aj, -A+Aj, -A+Aj, A+Aj, A+Aj, A+Aj, -A-Aj, A+Aj, A+Aj, A-Aj, A+Aj, -A+Aj, A+Aj, -A-Aj, -A-Aj, -A-Aj, A-Aj, A-Aj, -A-Aj, -A+Aj, A-Aj, A+Aj, -A-Aj, A-Aj, -A-Aj, -A-Aj, A+Aj, A+Aj, -A-Aj, -A+Aj, - A+Aj, A-Aj, A-Aj, A+Aj, -A-Aj, -A-Aj, A-Aj, -A-Aj, A-Aj, -A+Aj, A+Aj |
| | Polarization 2 | A+Aj, -A-Aj, -A-Aj, A+Aj, -A-Aj, A-Aj, -A+Aj, -A-Aj, A+Aj, A+Aj, A+Aj, A+Aj, -A+Aj, A+Aj, A+Aj, A-Aj, -A-Aj, A+Aj, A+Aj, -A+Aj, -A+Aj, -A+Aj, A-Aj, -A+Aj, -A+Aj, -A-Aj, -A+Aj, A+Aj, -A+Aj, A-Aj, A-Aj, A-Aj, -A-Aj, -A-Aj, A-Aj, A+Aj, -A-Aj, -A+Aj, A-Aj, -A-Aj, A-Aj, A-Aj, -A+Aj, -A+Aj, A-Aj, A+Aj, A+Aj, -A-Aj, -A-Aj, -A+Aj, A-Aj, A-Aj, -A-Aj, A-Aj, -A-Aj, A+Aj, -A+Aj |
| 8 | Polarization 1 | A-Aj, -A+Aj, -A+Aj, A-Aj, -A+Aj, A+Aj, -A-Aj, -A+Aj, A-Aj, A-Aj, A-Aj, A-Aj, -A-Aj, A-Aj, A-Aj, A+Aj, - A+Aj, A-Aj, A-Aj, -A-Aj, -A-Aj, -A-Aj, A+Aj, -A-Aj, -A-Aj, -A+Aj, -A-Aj, A-Aj, -A-Aj, A+Aj, A+Aj, A+Aj, -A+Aj, -A+Aj, A+Aj, A-Aj, -A+Aj, -A-Aj, A+Aj, -A+Aj, A+Aj, A+Aj, -A-Aj, -A-Aj, A+Aj, A-Aj, A-Aj, - A+Aj, -A+Aj, -A-Aj, A+Aj, A+Aj, -A+Aj, A+Aj, -A+Aj, A-Aj, -A-Aj |
| | Polarization 2 | A+Aj, -A-Aj, -A-Aj, A+Aj, -A-Aj, A-Aj, -A+Aj, -A-Aj, A+Aj, A+Aj, A+Aj, A+Aj, -A+Aj, A+Aj, A+Aj, A-Aj, -A-Aj, A+Aj, A+Aj, -A+Aj, -A+Aj, -A+Aj, A-Aj, -A+Aj, -A+Aj, -A-Aj, -A+Aj, A+Aj, -A+Aj, A-Aj, A-Aj, A-Aj, -A-Aj, -A-Aj, A-Aj, A+Aj, -A-Aj, -A+Aj, A-Aj, -A-Aj, A-Aj, A-Aj, -A+Aj, -A+Aj, A-Aj, A+Aj, A+Aj, -A-Aj, -A-Aj, -A+Aj, A-Aj, A-Aj, -A-Aj, A-Aj, -A-Aj, A+Aj, -A+Aj |
| 9 | Polarization 1 | -A+Aj, -A-Aj, -A+Aj, A-Aj, -A-Aj, A-Aj. -A-Aj, -A+Aj, -A+Aj, A+Aj, A-Aj, -A+Aj, A-Aj, A-Aj, A-Aj, -A-Aj, A-Aj, A+Aj, A-Aj, A-Aj, A-Aj, A-Aj, -A-Aj, -A+Aj, A+Aj, -A+Aj, -A-Aj, -A-Aj, -A+Aj, -A-Aj, -A-Aj, - A+Aj, A+Aj, -A-Aj, A-Aj, -A+Aj, A-Aj, -A+Aj, -A+Aj, A+Aj, A+Aj, A+Aj, A+Aj, -A+Aj, A+Aj, -A+Aj, -A-Aj, A+Aj, -A+Aj, A+Aj, A-Aj, A+Aj, -A-Aj, -A-Aj, A+Aj, A+Aj, -A-Aj |
| | Polarization 2 | A-Aj, A-Aj, A-Aj, A+Aj, -A+Aj, -A-Aj, A+Aj, A-Aj, A+Aj, -A+Aj, -A+Aj, A-Aj, A+Aj, A+Aj, A-Aj, A-Aj, A+Aj, A+Aj, -A+Aj, -A+Aj, -A-Aj, A-Aj, -A+Aj, -A-Aj, A+Aj, A+Aj, A-Aj, -A-Aj, -A+Aj, -A+Aj, -A-Aj, A-Aj, A-Aj, -A-Aj, -A-Aj, -A+Aj, -A-Aj, A+Aj, -A+Aj, -A-Aj, A-Aj, -A-Aj, A-Aj, A-Aj, -A-Aj, A+Aj, -A+Aj, A+Aj, -A+Aj, A+Aj, A+Aj, A-Aj, -A+Aj. -A-Aj, -A-Aj, -A-Aj, -A+Aj |

**Table 10-2**

| Index | Polarization | Pilot sequence |
|---|---|---|
| 1 | Polarization 1 | -A-Aj, -A+Aj, -A+Aj, A-Aj, A-Aj, -A+Aj, A+Aj, A-Aj, -A-Aj, A-Aj, -A+Aj, -A+Aj, -A-Aj, -A-Aj, -A+Aj, -A-Aj, A+Aj, A-Aj, -A-Aj, -A+Aj, -A+Aj, -A+Aj, A-Aj, -A+Aj, -A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj. -A+Aj, A-Aj, -A-Aj, -A-Aj, A+Aj, -A+Aj |
| | Polarization 2 | -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj |
| 2 | Polarization 1 | -A-Aj, -A+Aj, -A+Aj, A-Aj, A-Aj, -A+Aj, A+Aj, A-Aj, -A-Aj, A-Aj, -A+Aj, -A+Aj, -A-Aj, -A-Aj, -A+Aj, -A-Aj, A+Aj, A-Aj, -A-Aj, -A+Aj, -A+Aj, -A+Aj, A-Aj, -A+Aj, -A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj. -A+Aj, A-Aj, -A-Aj, -A-Aj, A+Aj, -A+Aj |
| | Polarization 2 | A-Aj, A+Aj, A+Aj, -A-Aj, -A-Aj, A+Aj. -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, -A+Aj, -A+Aj, A-Aj, A-Aj, A-Aj, -A-Aj, - A+Aj, -A+Aj, A-Aj, -A+Aj, A-Aj, -A-Aj, A+Aj, -A-Aj, A-Aj, A-Aj, -A+Aj, A+Aj |

(continued)

| Index | Polarization | Pilot sequence |
|---|---|---|
| 3 | Polarization 1 | A+Aj, A-Aj, A-Aj, -A+Aj, -A+Aj, A-Aj. -A-Aj, -A+Aj, A+Aj, -A+Aj, A-Aj, A-Aj, A+Aj, A+Aj, A-Aj, A+Aj, -A-Aj, -A+Aj, A+Aj, A-Aj, A-Aj. A-Aj, -A+Aj, A-Aj, A-Aj, -A-Aj, A+Aj, A-Aj, -A+Aj, -A+Aj, - A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, - A+Aj, -A-Aj, -A-Aj, A+Aj, -A-Aj, A+Aj, -A+Aj, A-Aj, -A+Aj, A+Aj, A+Aj, -A-Aj, A-Aj |
| | Polarization 2 | -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj |
| 4 | Polarization 1 | A+Aj, A-Aj, A-Aj, -A+Aj, -A+Aj, A-Aj. -A-Aj, -A+Aj, A+Aj, -A+Aj, A-Aj, A-Aj, A+Aj, A+Aj, A-Aj, A+Aj, -A-Aj, -A+Aj, A+Aj, A-Aj, A-Aj. A-Aj, -A+Aj, A-Aj, A-Aj, -A-Aj, A+Aj, A-Aj, -A+Aj, -A+Aj, - A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, - A+Aj, -A-Aj, -A-Aj, A+Aj, -A-Aj, A+Aj, -A+Aj, A-Aj, -A+Aj, A+Aj, A+Aj, -A-Aj, A-Aj |
| | Polarization 2 | A-Aj, A+Aj, A+Aj, -A-Aj, -A-Aj, A+Aj. -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, -A+Aj, -A+Aj, A-Aj, A-Aj, A-Aj, -A-Aj, - A+Aj, -A+Aj, A-Aj, -A+Aj, A-Aj, -A-Aj, A+Aj, -A-Aj, A-Aj, A-Aj, -A+Aj, A+Aj |
| 5 | Polarization 1 | A-Aj, -A+Aj, -A+Aj, -A-Aj, A-Aj, A-Aj, A+Aj, A-Aj, A-Aj, A+Aj, -A+Aj, -A+Aj, A-Aj, -A-Aj, A+Aj, A-Aj, -A-Aj, -A-Aj, A+Aj, A+Aj, -A-Aj, A+Aj, -A-Aj, A+Aj, A+Aj, -A-Aj, A-Aj, -A+Aj, -A-Aj, -A+Aj, -A-Aj, A-Aj, -A+Aj, -A+Aj, -A+Aj, -A+Aj. A-Aj, A-Aj, A-Aj, A-Aj, A+Aj, -A-Aj, A+Aj, A+Aj, A-Aj, -A+Aj, A-Aj, -A-Aj, -A+Aj, -A-Aj, A-Aj, A+Aj, -A+Aj, A+Aj, -A-Aj, -A+Aj, -A+Aj |
| | Polarization 2 | -A-Aj, -A+Aj, A+Aj, A-Aj, A-Aj, A+Aj. -A-Aj, -A-Aj, -A+Aj, A-Aj, A+Aj, A-Aj, -A-Aj, -A+Aj, A+Aj, A-Aj, -A-Aj, -A-Aj, A+Aj, -A-Aj, -A+Aj, A-Aj, A+Aj, -A-Aj, -A-Aj, A+Aj, A-Aj, -A+Aj, A+Aj, A+Aj, A-Aj, -A-Aj, A+Aj, -A-Aj, A-Aj, -A+Aj, -A+Aj, -A-Aj, A+Aj, -A-Aj, -A+Aj, -A+Aj, -A+Aj, -A-Aj, A-Aj, A-Aj, A+Aj, A-Aj, -A+Aj, -A-Aj, A+Aj, -A+Aj, -A+Aj, A+Aj, -A-Aj, A-Aj, A-Aj, A+Aj |
| 6 | Polarization 1 | A+Aj, -A-Aj, A+Aj, A-Aj, -A+Aj, -A+Aj, -A+Aj, A+Aj, A-Aj, A-Aj, -A+Aj, A+Aj, A-Aj, -A-Aj, A-Aj, A-Aj, A-Aj, A-Aj, -A-Aj, -A-Aj, -A+Aj, -A+Aj, -A-Aj, -A-Aj, A-Aj, A-Aj, A-Aj, -A+Aj, -A+Aj, -A-Aj, -A-Aj, A+Aj, A+Aj, A+Aj, -A-Aj, A-Aj, A+Aj, -A+Aj, -A+Aj, A+Aj, -A+Aj, -A-Aj, A+Aj, -A-Aj, A+Aj, A-Aj, A+Aj, -A+Aj, -A+Aj, A-Aj, A-Aj, A+Aj, -A-Aj, -A-Aj, A+Aj, -A+Aj, A-Aj, -A+Aj |
| | Polarization 2 | -A+Aj, -A-Aj, A-Aj, -A-Aj, -A+Aj, A-Aj, -A+Aj, -A-Aj, A+Aj, -A-Aj, -A+Aj, A-Aj, A+Aj, -A-Aj, -A+Aj, A+Aj, A+Aj, -A-Aj, -A+Aj, -A+Aj, A+Aj, A-Aj, A-Aj, A+Aj, -A+Aj, -A-Aj, A+Aj, -A+Aj, -A-Aj, -A+Aj, -A-Aj, -A+Aj, -A+Aj, -A+Aj, A+Aj, A+Aj, A+Aj, -A-Aj, A-Aj, -A+Aj, A+Aj, A+Aj, -A-Aj, A-Aj, A-Aj, - A-Aj, -A-Aj, A-Aj, A-Aj, A+Aj, A-Aj, A-Aj, A+Aj, -A-Aj, A+Aj, -A-Aj, A-Aj |
| 7 | Polarization 1 | A+Aj, -A-Aj, -A+Aj, -A+Aj, -A-Aj, A-Aj, -A-Aj, A-Aj, A+Aj, -A-Aj, -A+Aj, -A+Aj, -A+Aj, A+Aj, A-Aj, A+Aj, -A-Aj, -A-Aj, A+Aj, -A+Aj, -A-Aj, A+Aj, A-Aj, A+Aj, A-Aj, -A-Aj, A-Aj, -A-Aj, A+Aj, -A+Aj, A-Aj, -A+Aj, -A-Aj, A+Aj, A-Aj, -A+Aj, A-Aj, A+Aj, A-Aj, A+Aj, A-Aj, -A-Aj, -A+Aj, -A-Aj, A-Aj, A+Aj, A+Aj, -A+Aj, -A-Aj, -A+Aj, A-Aj, -A+Aj, A+Aj, A-Aj, A-Aj, -A+Aj, -A+Aj |
| | Polarization 2 | -A+Aj, -A+Aj, -A+Aj, A-Aj, A-Aj, -A-Aj, A+Aj, A-Aj, -A-Aj, A+Aj, A-Aj, A-Aj, A+Aj, A+Aj, A-Aj, -A-Aj, A-Aj, A+Aj, A+Aj, A+Aj, A+Aj, A+Aj, A-Aj, A+Aj, -A+Aj, -A-Aj, A+Aj, A+Aj, -A+Aj, -A+Aj, -A-Aj, -A-Aj, -A-Aj, -A-Aj, A-Aj, -A-Aj, -A+Aj, -A-Aj, A+Aj, -A+Aj, -A+Aj, A+Aj, -A+Aj, -A-Aj, -A-Aj, - A+Aj, -A-Aj, A-Aj, A-Aj, -A-Aj, A-Aj, -A+Aj, A-Aj, A+Aj, -A+Aj, -A+Aj, -A-Aj |
| 8 | Polarization 1 | A+Aj, A-Aj, A-Aj, A-Aj, -A+Aj, A-Aj, A+Aj, -A+Aj, A+Aj, A+Aj, -A-Aj, -A-Aj, A+Aj, -A-Aj, -A-Aj, - A+Aj, A-Aj, A-Aj, A-Aj, A+Aj, -A+Aj, -A+Aj, -A+Aj, -A+Aj, -A+Aj, -A-Aj, -A+Aj, -A-Aj, A-Aj, -A-Aj, -A-Aj, -A-Aj, -A+Aj, A-Aj, A-Aj, -A-Aj, -A+Aj, A-Aj, -A-Aj, -A+Aj, -A+Aj, -A+Aj, A+Aj, A+Aj, -A+Aj, A-Aj, A+Aj, A+Aj, -A-Aj, A+Aj, A-Aj, A+Aj, -A-Aj, -A-Aj, A+Aj, A-Aj, A+Aj |
| | Polarization 2 | A-Aj, -A+Aj, -A+Aj, -A-Aj, A+Aj, A-Aj, A+Aj, A+Aj, A+Aj, -A+Aj, -A+Aj, -A+Aj, -A-Aj, A-Aj, A+Aj, - A-Aj, A+Aj, A-Aj, -A-Aj, -A+Aj, -A-Aj, A+Aj, -A+Aj, A+Aj, -A-Aj, -A-Aj, A+Aj, A-Aj, -A+Aj, A-Aj, - A+Aj, -A-Aj, -A+Aj, A-Aj, -A-Aj, -A+Aj, A+Aj, A+Aj, -A-Aj, A-Aj, -A+Aj, A-Aj, A+Aj, -A-Aj, A-Aj, A-Aj, A-Aj, -A-Aj, A+Aj, -A-Aj, -A+Aj, A-Aj, A-Aj, -A-Aj, A+Aj, -A-Aj, A+Aj |

(4) It is assumed that $N_{PS}$ = 65. If a remainder of $N_{TS}$ divided by 4 is 0, the pilot sequence is one item in the following Table 11-1. If a remainder of $N_{TS}$ divided by 4 is 2, the pilot sequence is one item in the following Table 11-1 or Table 11-2.

**Table 11-1**

| Index | Polarization | Pilot sequence |
|---|---|---|
| 1 | Polarization 1 | -A-Aj, A-Aj, -A+Aj, A-Aj, A+Aj, A-Aj, -A+Aj, -A-Aj, A+Aj, A+Aj, A-Aj, -A+Aj, A+Aj, A-Aj, -A-Aj, -A+Aj, -A+Aj, A+Aj, A+Aj, -A+Aj, A+Aj, -A+Aj, A-Aj, A+Aj, -A+Aj, -A-Aj, A+Aj, -A-Aj, A+Aj, A-Aj, -A-Aj, A-Aj, -A-Aj, -A-Aj, -A-Aj, -A+Aj, A+Aj, -A-Aj, A+Aj, -A+Aj, -A+Aj, -A+Aj, A+Aj, -A-Aj, -A-Aj, -A-Aj, A-Aj, A-Aj, A+Aj, -A-Aj, -A+Aj, -A+Aj, -A-Aj, A-Aj, A-Aj, -A-Aj, - A+Aj, A-Aj, A-Aj, -A-Aj, A-Aj, A+Aj, -A+Aj, A+Aj, A-Aj |
| | Polarization 2 | -A+Aj, A+Aj, -A-Aj, A+Aj, A-Aj, A+Aj, -A-Aj, -A+Aj, A-Aj, A-Aj, A+Aj, -A-Aj, A-Aj, A+Aj, -A+Aj, -A-Aj, -A-Aj, A-Aj, A-Aj, -A-Aj, A-Aj, -A-Aj, A+Aj, A-Aj, -A-Aj, -A+Aj, A-Aj, -A+Aj, A-Aj, A+Aj, -A+Aj, A+Aj, -A+Aj, -A+Aj, -A+Aj, -A-Aj, A-Aj, -A+Aj, A-Aj, -A-Aj, -A-Aj, -A-Aj, A-Aj, -A+Aj, -A+Aj, -A+Aj, A+Aj, A+Aj, A-Aj, -A+Aj, -A-Aj, -A-Aj, -A+Aj, A+Aj, A+Aj, -A+Aj, - A-Aj, A+Aj, A+Aj, -A+Aj, A+Aj, A-Aj, -A-Aj, A-Aj, A+Aj |
| 2 | Polarization 1 | -A-Aj, A-Aj, -A+Aj, A-Aj, A+Aj, A-Aj, -A+Aj, -A-Aj, A+Aj, A+Aj, A-Aj, -A+Aj, A+Aj, A-Aj, -A-Aj, -A+Aj, -A+Aj, A+Aj, A+Aj, -A+Aj, A+Aj, -A+Aj, A-Aj, A+Aj, -A+Aj, -A-Aj, A+Aj, -A-Aj, A+Aj, A-Aj, -A-Aj, A-Aj, -A-Aj, -A-Aj, -A-Aj, -A+Aj, A+Aj, -A-Aj, A+Aj, -A+Aj, -A+Aj, -A+Aj, A+Aj, -A-Aj, -A-Aj, -A-Aj, A-Aj, A-Aj, A+Aj, -A-Aj, -A+Aj, -A+Aj, -A-Aj, A-Aj, A-Aj, -A-Aj, - A+Aj, A-Aj, A-Aj, -A-Aj, A-Aj, A+Aj, -A+Aj, A+Aj, A-Aj |
| | Polarization 2 | A-Aj, -A-Aj, A+Aj, -A-Aj, -A+Aj, -A-Aj, A+Aj, A-Aj, -A+Aj, -A+Aj, -A-Aj, A+Aj, -A+Aj, -A-Aj, A-Aj, A+Aj, A+Aj, -A+Aj, -A+Aj, A+Aj, -A+Aj, A+Aj, -A-Aj, -A+Aj, A+Aj, A-Aj, -A+Aj, A-Aj, - A+Aj, -A-Aj, A-Aj, -A-Aj, A-Aj, A-Aj, A-Aj, A+Aj, -A+Aj, A-Aj, -A+Aj, A+Aj, A+Aj, A+Aj, - A+Aj, A-Aj, A-Aj, A-Aj, -A-Aj, -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj |
| 3 | Polarization 1 | -A+Aj, A+Aj, -A-Aj, A+Aj, A-Aj, A+Aj, -A-Aj, -A+Aj, A-Aj, A-Aj, A+Aj, -A-Aj, A-Aj, A+Aj, - A+Aj, -A-Aj, -A-Aj, A-Aj, A-Aj, -A-Aj, A-Aj, -A-Aj, A+Aj, A-Aj, -A-Aj, -A+Aj, A-Aj, -A+Aj, A-Aj, A+Aj, -A+Aj, A+Aj, -A+Aj, -A+Aj, -A+Aj, -A-Aj, A-Aj, -A+Aj, A-Aj, -A-Aj, -A-Aj, -A-Aj, A-Aj, -A+Aj, -A+Aj, -A+Aj, A+Aj, A+Aj, A-Aj, -A+Aj, -A-Aj, -A-Aj, -A+Aj, A+Aj, A+Aj, -A+Aj, - A-Aj, A+Aj, A+Aj, -A+Aj, A+Aj, A-Aj, -A-Aj, A-Aj, A+Aj |
| | Polarization 2 | A+Aj, -A+Aj, A-Aj, -A+Aj, -A-Aj, -A+Aj, A-Aj, A+Aj, -A-Aj, -A-Aj, -A+Aj, A-Aj, -A-Aj, -A+Aj, A+Aj, A-Aj, A-Aj, -A-Aj, -A-Aj, A-Aj, -A-Aj, A-Aj, -A+Aj, -A-Aj, A-Aj, A+Aj, -A-Aj, A+Aj, -A-Aj, -A+Aj, A+Aj, -A+Aj, A+Aj, A+Aj, A+Aj, -A-Aj, -A-Aj, A+Aj, -A-Aj, A-Aj, A-Aj, A-Aj, -A-Aj, A+Aj, A+Aj, A+Aj, -A+Aj, -A+Aj, -A-Aj, A+Aj, A-Aj, A-Aj, A+Aj, -A+Aj, -A+Aj, A+Aj, A-Aj, - A+Aj, -A+Aj, A+Aj, -A+Aj, -A-Aj, A-Aj, -A-Aj, -A+Aj |
| 4 | Polarization 1 | A-Aj, -A-Aj, A+Aj, -A-Aj, -A+Aj, -A-Aj, A+Aj, A-Aj, -A+Aj, -A+Aj, -A-Aj, A+Aj, -A+Aj, -A-Aj, A-Aj, A+Aj, A+Aj, -A+Aj, -A+Aj, A+Aj, -A+Aj, A+Aj, -A-Aj, -A+Aj, A+Aj, A-Aj, -A+Aj, A-Aj, - A+Aj, -A-Aj, A-Aj, -A-Aj, A-Aj, A-Aj, A-Aj, A+Aj, -A+Aj, A-Aj, -A+Aj, A+Aj, A+Aj, A+Aj, - A+Aj, A-Aj, A-Aj, A-Aj, -A-Aj, -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj |
| | Polarization 2 | A+Aj, -A+Aj, A-Aj, -A+Aj, -A-Aj, -A+Aj, A-Aj, A+Aj, -A-Aj, -A-Aj, -A+Aj, A-Aj, -A-Aj, -A+Aj, A+Aj, A-Aj, A-Aj, -A-Aj, -A-Aj, A-Aj, -A-Aj, A-Aj, -A+Aj, -A-Aj, A-Aj, A+Aj, -A-Aj, A+Aj, -A-Aj, -A+Aj, A+Aj, -A+Aj, A+Aj, A+Aj, A+Aj, -A-Aj, -A-Aj, A+Aj, -A-Aj, A-Aj, A-Aj, A-Aj, -A-Aj, A+Aj, A+Aj, A+Aj, -A+Aj, -A+Aj, -A-Aj, A+Aj, A-Aj, A-Aj, A+Aj, -A+Aj, -A+Aj, A+Aj, A-Aj, - A+Aj, -A+Aj, A+Aj, -A+Aj, -A-Aj, A-Aj, -A-Aj, -A+Aj |

(continued)

| Index | Polarization | Pilot sequence |
|---|---|---|
| 5 | Polarization 1 | -A-Aj, A+Aj, A+Aj, A-Aj, A+Aj, A-Aj, A+Aj, -A-Aj, A-Aj, A+Aj, -A+Aj, -A-Aj, -A+Aj, -A+Aj, - A-Aj, -A-Aj, -A+Aj, A+Aj, A+Aj, A-Aj, -A+Aj, A+Aj, -A-Aj, A+Aj, -A+Aj, A+Aj, -A-Aj, -A+Aj, - A-Aj, -A-Aj, A+Aj, A-Aj, -A-Aj, -A+Aj, A-Aj, A+Aj, -A+Aj, A-Aj, -A-Aj, A-Aj, A+Aj, A+Aj, - A+Aj, A-Aj, A-Aj, A+Aj, -A-Aj, -A-Aj, A-Aj, A-Aj, A+Aj, A-Aj, -A+Aj, -A+Aj, -A+Aj, -A-Aj, A-Aj, -A-Aj, -A-Aj, -A-Aj, -A+Aj, -A+Aj, A-Aj, -A+Aj, A-Aj |
| | Polarization 2 | -A+Aj, A-Aj, A-Aj, A+Aj, A-Aj, A+Aj, A-Aj, -A+Aj, A+Aj, A-Aj, -A-Aj, -A+Aj, -A-Aj, -A-Aj, - A+Aj, -A+Aj, -A-Aj, A-Aj, A-Aj, A+Aj, -A-Aj, A-Aj, -A+Aj, A-Aj, -A-Aj, A-Aj, -A+Aj, -A-Aj, - A+Aj, -A+Aj, A-Aj, A+Aj, -A+Aj, -A-Aj, A+Aj, A-Aj, -A-Aj, A+Aj, -A+Aj, A+Aj, A-Aj, A-Aj, -A-Aj, A+Aj, A+Aj, A-Aj, -A+Aj, -A+Aj, A+Aj, A+Aj, A-Aj, A+Aj, -A-Aj, -A-Aj, -A-Aj, -A+Aj, A+Aj, -A+Aj, -A+Aj, -A+Aj, -A-Aj, -A-Aj, A+Aj, -A-Aj, A+Aj |
| 6 | Polarization 1 | -A-Aj, A+Aj, A+Aj, A-Aj, A+Aj, A-Aj, A+Aj, -A-Aj, A-Aj, A+Aj, -A+Aj, -A-Aj, -A+Aj, -A+Aj, - A-Aj, -A-Aj, -A+Aj, A+Aj, A+Aj, A-Aj, -A+Aj, A+Aj, -A-Aj, A+Aj, -A+Aj, A+Aj, -A-Aj, -A+Aj, -A-Aj, -A-Aj, A+Aj, A-Aj, -A-Aj, -A+Aj, A-Aj, A+Aj, -A+Aj, A-Aj, -A-Aj, A-Aj, A+Aj, A+Aj, - A+Aj, A-Aj, A-Aj, A+Aj, -A-Aj, -A-Aj, A-Aj, A-Aj, A+Aj, A-Aj, -A+Aj, -A+Aj, -A+Aj, -A-Aj, A-Aj, -A-Aj, -A-Aj, -A-Aj, -A+Aj, -A+Aj, A-Aj, -A+Aj, A-Aj |
| | Polarization 2 | A-Aj, -A+Aj, -A+Aj, -A-Aj, -A+Aj, -A-Aj, -A+Aj, A-Aj, -A-Aj, -A+Aj, A+Aj, A-Aj, A+Aj, A+Aj, A-Aj, A-Aj, A+Aj, -A+Aj, -A+Aj, -A-Aj, A+Aj, -A+Aj, A-Aj, -A+Aj, A+Aj, -A+Aj, A-Aj, A+Aj, A-Aj, A-Aj, -A+Aj, -A-Aj, A-Aj, A+Aj, -A-Aj, -A+Aj, A+Aj, -A-Aj, A-Aj, -A-Aj, -A+Aj, -A+Aj, A+Aj, -A-Aj, -A-Aj, -A+Aj, A-Aj, A-Aj, -A-Aj, -A-Aj, -A+Aj, -A-Aj, A+Aj, A+Aj, A+Aj, A-Aj, - A-Aj, A-Aj, A-Aj, A-Aj, A+Aj, A+Aj, -A-Aj, A+Aj, -A-Aj |
| 7 | Polarization 1 | -A+Aj, A-Aj, A-Aj, A+Aj, A-Aj, A+Aj, A-Aj, -A+Aj, A+Aj, A-Aj, -A-Aj, -A+Aj, -A-Aj, -A-Aj, - A+Aj, -A+Aj, -A-Aj, A-Aj, A-Aj, A+Aj, -A-Aj, A-Aj, -A+Aj, A-Aj, -A-Aj, A-Aj, -A+Aj, -A-Aj, - A+Aj, -A+Aj, A-Aj, A+Aj, -A+Aj, -A-Aj, A+Aj, A-Aj, -A-Aj, A+Aj, -A+Aj, A+Aj, A-Aj, A-Aj, -A-Aj, A+Aj, A+Aj, A-Aj, -A+Aj, -A+Aj, A+Aj, A+Aj, A-Aj, A+Aj, -A-Aj, -A-Aj, -A-Aj, -A+Aj, A+Aj, -A+Aj, -A+Aj, -A+Aj, -A-Aj, -A-Aj, A+Aj, -A-Aj, A+Aj |
| | Polarization 2 | A+Aj, -A-Aj, -A-Aj, -A+Aj, -A-Aj, -A+Aj, -A-Aj, A+Aj, -A+Aj, -A-Aj, A-Aj, A+Aj, A-Aj, A-Aj, A+Aj, A+Aj, A-Aj, -A-Aj, -A-Aj, -A+Aj, A-Aj, -A-Aj, A+Aj, -A-Aj, A-Aj, -A-Aj, A+Aj, A-Aj, A+Aj, A+Aj, -A-Aj, -A+Aj, A+Aj, A-Aj, -A+Aj, -A-Aj, A-Aj, -A+Aj, A+Aj, -A+Aj, -A-Aj, -A-Aj, A-Aj, -A+Aj, -A+Aj, -A-Aj, A+Aj, A+Aj, -A+Aj, -A+Aj, -A-Aj, -A+Aj, A-Aj, A-Aj, A-Aj, A+Aj, - A+Aj, A+Aj, A+Aj, A+Aj, A-Aj, A-Aj, -A+Aj, A-Aj, -A+Aj |
| 8 | Polarization 1 | A-Aj, -A+Aj, -A+Aj, -A-Aj, -A+Aj, -A-Aj, -A+Aj, A-Aj, -A-Aj, -A+Aj, A+Aj, A-Aj, A+Aj, A+Aj, A-Aj, A-Aj, A+Aj, -A+Aj, -A+Aj, -A-Aj, A+Aj, -A+Aj, A-Aj, -A+Aj, A+Aj, -A+Aj, A-Aj, A+Aj, A-Aj, A-Aj, -A+Aj, -A-Aj, A-Aj, A+Aj, -A-Aj, -A+Aj, A+Aj, -A-Aj, A-Aj, -A-Aj, -A+Aj, -A+Aj, A+Aj, -A-Aj, -A-Aj, -A+Aj, A-Aj, A-Aj, -A-Aj, -A-Aj, -A+Aj, -A-Aj, A+Aj, A+Aj, A+Aj, A-Aj, - A-Aj, A-Aj, A-Aj, A-Aj, A+Aj, A+Aj, -A-Aj, A+Aj, -A-Aj |
| | Polarization 2 | A+Aj, -A-Aj, -A-Aj, -A+Aj, -A-Aj, -A+Aj, -A-Aj, A+Aj, -A+Aj, -A-Aj, A-Aj, A+Aj, A-Aj, A-Aj, A+Aj, A+Aj, A-Aj, -A-Aj, -A-Aj, -A+Aj, A-Aj, -A-Aj, A+Aj, -A-Aj, A-Aj, -A-Aj, A+Aj, A-Aj, A+Aj, A+Aj, -A-Aj, -A+Aj, A+Aj, A-Aj, -A+Aj, -A-Aj, A-Aj, -A+Aj, A+Aj, -A+Aj, -A-Aj, -A-Aj, A-Aj, -A+Aj, -A+Aj, -A-Aj, A+Aj, A+Aj, -A+Aj, -A+Aj, -A-Aj, -A+Aj, A-Aj, A-Aj, A-Aj, A+Aj, - A+Aj, A+Aj, A+Aj, A+Aj, A-Aj, A-Aj, -A+Aj, A-Aj, -A+Aj |
| 9 | Polarization 1 | -A-Aj, -A+Aj, A-Aj, -A+Aj, A-Aj, A-Aj, -A-Aj, -A-Aj, -A-Aj, -A+Aj, -A-Aj, A-Aj, A-Aj, A-Aj, - A+Aj, A+Aj, -A+Aj, -A+Aj, -A-Aj, -A-Aj, A+Aj, -A+Aj, -A+Aj, A-Aj, A+Aj, A+Aj, -A+Aj, -A-Aj, -A+Aj, A-Aj, A+Aj, -A+Aj, A-Aj, -A-Aj, -A+Aj, A+Aj, -A-Aj, -A-Aj, A-Aj, -A-Aj, A+Aj, A-Aj, A+Aj, -A-Aj, A+Aj, A-Aj, -A+Aj, A+Aj, A+Aj, A-Aj, -A-Aj, -A-Aj, A-Aj, A-Aj, -A-Aj, A-Aj, A+Aj, -A+Aj, -A-Aj, A+Aj, -A+Aj, A+Aj, -A+Aj, A+Aj, A+Aj |
| | Polarization 2 | -A+Aj, -A-Aj, A+Aj, -A-Aj, A+Aj, A+Aj, -A+Aj, -A+Aj, -A+Aj, -A-Aj, -A+Aj, A+Aj, A+Aj, A+Aj, -A-Aj, A-Aj, -A-Aj, -A-Aj, -A+Aj, -A+Aj, A-Aj, -A-Aj, -A-Aj, A+Aj, A-Aj, A-Aj, -A-Aj, - A+Aj, -A-Aj, A+Aj, A-Aj, -A-Aj, -A+Aj, -A-Aj, A-Aj, -A+Aj, -A+Aj, A+Aj, -A+Aj, A-Aj, A+Aj, A-Aj, -A+Aj, A-Aj, A+Aj, -A-Aj, A-Aj, A-Aj, A+Aj, -A+Aj, -A+Aj, A+Aj, A+Aj, -A+Aj, A+Aj, A-Aj, -A-Aj, -A+Aj, A-Aj, -A-Aj, A-Aj, -A-Aj, A-Aj, A-Aj |

(continued)

| Index | Polarization | Pilot sequence |
|---|---|---|
| 10 | Polarization 1 | -A-Aj, -A+Aj, A-Aj, -A+Aj, A-Aj, A-Aj, -A-Aj, -A-Aj, -A-Aj, -A+Aj, -A-Aj, A-Aj, A-Aj, A-Aj, -A+Aj, A+Aj, -A+Aj, -A+Aj, -A-Aj, -A-Aj, A+Aj, -A+Aj, -A+Aj, A-Aj, A+Aj, A+Aj, -A+Aj, -A-Aj, -A+Aj, A-Aj, A+Aj, -A+Aj, A-Aj, -A-Aj, -A+Aj, A+Aj, -A-Aj, -A-Aj, A-Aj, -A-Aj, A+Aj, A-Aj, A+Aj, -A-Aj, A+Aj, A-Aj, -A+Aj, A+Aj, A+Aj, A-Aj, -A-Aj, -A-Aj, A-Aj, A-Aj, -A-Aj, A-Aj, A+Aj, -A+Aj, -A-Aj, A+Aj, -A+Aj, A+Aj, -A+Aj, A+Aj, A+Aj |
| | Polarization 2 | A-Aj, A+Aj, -A-Aj, A+Aj, -A-Aj, -A-Aj, A-Aj, A-Aj, A-Aj, A+Aj, A-Aj, -A-Aj, -A-Aj, -A-Aj, A+Aj, -A+Aj, A+Aj, A+Aj, A-Aj, A-Aj, -A+Aj, A+Aj, A+Aj, -A-Aj, -A+Aj, -A+Aj, A+Aj, A-Aj, A+Aj, -A-Aj, -A+Aj, A+Aj, -A-Aj, A-Aj, A+Aj, -A+Aj, A-Aj, A-Aj, -A-Aj, A-Aj, -A+Aj, -A-Aj, - A+Aj, A-Aj, -A+Aj, -A-Aj, A+Aj, -A+Aj, -A+Aj, -A-Aj, A-Aj, A-Aj, -A-Aj, -A-Aj, A-Aj, -A-Aj, - A+Aj, A+Aj, A-Aj, -A+Aj, A+Aj, -A+Aj, A+Aj, -A+Aj, -A+Aj |
| 11 | Polarization 1 | -A+Aj, -A-Aj, A+Aj, -A-Aj, A+Aj, A+Aj, -A+Aj, -A+Aj, -A+Aj, -A-Aj, -A+Aj, A+Aj, A+Aj, A+Aj, -A-Aj, A-Aj, -A-Aj, -A-Aj, -A+Aj, -A+Aj, A-Aj, -A-Aj, -A-Aj, A+Aj, A-Aj, A-Aj, -A-Aj, - A+Aj, -A-Aj, A+Aj, A-Aj, -A-Aj, A+Aj, -A+Aj, -A-Aj, A-Aj, -A+Aj, -A+Aj, A+Aj, -A+Aj, A-Aj, A+Aj, A-Aj, -A+Aj, A-Aj, A+Aj, -A-Aj, A-Aj, A-Aj, A+Aj, -A+Aj, -A+Aj, A+Aj, A+Aj, -A+Aj, A+Aj, A-Aj, -A-Aj, -A+Aj, A-Aj, -A-Aj, A-Aj, -A-Aj, A-Aj, A-Aj |
| | Polarization 2 | A+Aj, A-Aj, -A+Aj, A-Aj, -A+Aj, -A+Aj, A+Aj, A+Aj, A+Aj, A-Aj, A+Aj, -A+Aj, -A+Aj, -A+Aj, A-Aj, -A-Aj, A-Aj, A-Aj, A+Aj, A+Aj, -A-Aj, A-Aj, A-Aj, -A+Aj, -A-Aj, -A-Aj, A-Aj, A+Aj, A-Aj, -A+Aj, -A-Aj, A-Aj, -A+Aj, A+Aj, A-Aj, -A-Aj, A+Aj, A+Aj, -A+Aj, A+Aj, -A-Aj, -A+Aj, -A-Aj, A+Aj, -A-Aj, -A+Aj, A-Aj, -A-Aj, -A-Aj, -A+Aj, A+Aj, A+Aj, -A+Aj, -A+Aj, A+Aj, -A+Aj, -A-Aj, A-Aj, A+Aj, -A-Aj, A-Aj, -A-Aj, A-Aj, -A-Aj, -A-Aj |
| 12 | Polarization 1 | A-Aj, A+Aj, -A-Aj, A+Aj, -A-Aj, -A-Aj, A-Aj, A-Aj, A-Aj, A+Aj, A-Aj, -A-Aj, -A-Aj, -A-Aj, A+Aj, -A+Aj, A+Aj, A+Aj, A-Aj, A-Aj, -A+Aj, A+Aj, A+Aj, -A-Aj, -A+Aj, -A+Aj, A+Aj, A-Aj, A+Aj, -A-Aj, -A+Aj, A+Aj, -A-Aj, A-Aj, A+Aj, -A+Aj, A-Aj, A-Aj, -A-Aj, A-Aj, -A+Aj, -A-Aj, - A+Aj, A-Aj, -A+Aj, -A-Aj, A+Aj, -A+Aj, -A+Aj, -A-Aj, A-Aj, A-Aj, -A-Aj, -A-Aj, A-Aj, -A-Aj, - A+Aj, A+Aj, A-Aj, -A+Aj, A+Aj, -A+Aj, A+Aj, -A+Aj, -A+Aj |
| | Polarization 2 | A+Aj, A-Aj, -A+Aj, A-Aj, -A+Aj, -A+Aj, A+Aj, A+Aj, A+Aj, A-Aj, A+Aj, -A+Aj, -A+Aj, -A+Aj, A-Aj, -A-Aj, A-Aj, A-Aj, A+Aj, A+Aj, -A-Aj, A-Aj, A-Aj, -A+Aj, -A-Aj, -A-Aj, A-Aj, A+Aj, A-Aj, -A+Aj, -A-Aj, A-Aj, -A+Aj, A+Aj, A-Aj, -A-Aj, A+Aj, A+Aj, -A+Aj, A+Aj, -A-Aj, -A+Aj, -A-Aj, A+Aj, -A-Aj, -A+Aj, A-Aj, -A-Aj, -A-Aj, -A+Aj, A+Aj, A+Aj, -A+Aj, -A+Aj, A+Aj, -A+Aj, -A-Aj, A-Aj, A+Aj, -A-Aj, A-Aj, -A-Aj, A-Aj, -A-Aj, -A-Aj |
| 13 | Polarization 1 | -A-Aj, A+Aj, -A-Aj, A+Aj, A+Aj, -A+Aj, -A-Aj, -A-Aj, -A-Aj, A+Aj, A+Aj, A+Aj, A+Aj, -A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, - A+Aj, A+Aj, A-Aj, -A+Aj, -A+Aj, A-Aj, A-Aj, -A-Aj, A+Aj, -A-Aj, -A+Aj, -A-Aj, -A-Aj, A-Aj, - A-Aj, A-Aj, -A+Aj, A+Aj, A+Aj, -A-Aj, A+Aj, -A+Aj, A-Aj |
| | Polarization 2 | -A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, -A+Aj, A+Aj, -A+Aj, -A+Aj, A+Aj, A+Aj, -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj, A+Aj, - A+Aj, A+Aj, -A-Aj, A-Aj, A-Aj, -A+Aj, A-Aj, -A-Aj, A+Aj |
| 14 | Polarization 1 | -A-Aj, A+Aj, -A-Aj, A+Aj, A+Aj, -A+Aj, -A-Aj, -A-Aj, -A-Aj, A+Aj, A+Aj, A+Aj, A+Aj, -A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, - A+Aj, A+Aj, A-Aj, -A+Aj, -A+Aj, A-Aj, A-Aj, -A-Aj, A+Aj, -A-Aj, -A+Aj, -A-Aj, -A-Aj, A-Aj, - A-Aj, A-Aj, -A+Aj, A+Aj, A+Aj, -A-Aj, A+Aj, -A+Aj, A-Aj |
| | Polarization 2 | A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, - A-Aj, -A-Aj, -A-Aj, A-Aj, A+Aj, -A+Aj, A-Aj, -A-Aj, A-Aj, A-Aj, -A-Aj, -A-Aj, A+Aj, A-Aj, A+Aj, -A+Aj, -A-Aj, A+Aj, A+Aj, -A-Aj, -A-Aj, A-Aj, -A+Aj, A-Aj, A+Aj, A-Aj, A-Aj, -A-Aj, A-Aj, -A-Aj, A+Aj, -A+Aj, -A+Aj, A-Aj, -A+Aj, A+Aj, -A-Aj |

(continued)

| Index | Polarization | Pilot sequence |
|---|---|---|
| 15 | Polarization 1 | -A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, -A+Aj, A+Aj, -A+Aj, -A+Aj, A+Aj, A+Aj, -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj, A+Aj, - A+Aj, A+Aj, -A-Aj, A-Aj, A-Aj, -A+Aj, A-Aj, -A-Aj, A+Aj |
| | Polarization 2 | A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, -A-Aj, A-Aj, A-Aj, -A-Aj, A-Aj, A-Aj, A-Aj, -A+Aj, A+Aj, -A-Aj, -A+Aj, -A+Aj, A-Aj, -A+Aj, -A+Aj, -A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj, -A+Aj, A-Aj, -A-Aj, -A-Aj, A+Aj, -A-Aj, A-Aj, -A+Aj |
| 16 | Polarization 1 | A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, - A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, - A-Aj, -A-Aj, A-Aj, A+Aj, -A+Aj, A-Aj, -A-Aj, A-Aj, A-Aj, -A-Aj, -A-Aj, A+Aj, A-Aj, A+Aj, -A+Aj, -A-Aj, A+Aj, A+Aj, -A-Aj, -A-Aj, A-Aj, -A+Aj, A-Aj, A+Aj, A-Aj, A-Aj, -A-Aj, A-Aj, -A-Aj, A+Aj, -A+Aj, -A+Aj, A-Aj, -A+Aj, A+Aj, -A-Aj |
| | Polarization 2 | A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, - A+Aj, -A-Aj, A-Aj, A-Aj, -A-Aj, A-Aj, A-Aj, A-Aj, -A+Aj, A+Aj, -A-Aj, -A+Aj, -A+Aj, A-Aj, - A+Aj, -A+Aj, -A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj, -A+Aj, A-Aj, -A-Aj, -A-Aj, A+Aj, -A-Aj, A-Aj, -A+Aj |
| 17 | Polarization 1 | -A-Aj, A+Aj, -A+Aj, -A+Aj, A-Aj, -A+Aj, -A+Aj, A+Aj, -A-Aj, -A+Aj, -A-Aj, A+Aj, -A-Aj, A+Aj, A+Aj, A+Aj, -A-Aj, A+Aj, A-Aj, A-Aj, A+Aj, -A+Aj, -A-Aj, -A+Aj, -A+Aj, -A-Aj, -A-Aj, A-Aj, -A-Aj, -A+Aj, -A+Aj, A-Aj, -A-Aj, -A-Aj, -A-Aj, A-Aj, A+Aj, A+Aj, -A+Aj, -A+Aj, A+Aj, - A-Aj, A-Aj, -A+Aj, A-Aj, A-Aj, A-Aj, A-Aj, -A-Aj, -A-Aj, A-Aj, A-Aj, -A+Aj, A+Aj, A-Aj, A+Aj, A-Aj, -A+Aj, A+Aj, A-Aj, -A-Aj, A+Aj, -A-Aj, -A+Aj, A+Aj |
| | Polarization 2 | -A+Aj, A-Aj, -A-Aj, A-Aj, -A-Aj, -A-Aj, A+Aj, -A-Aj, A+Aj, -A-Aj, A-Aj, -A+Aj, -A+Aj, A+Aj, A+Aj, -A-Aj, -A+Aj, -A+Aj, -A+Aj, A-Aj, -A-Aj, A+Aj, -A+Aj, A+Aj, -A+Aj, A-Aj, -A-Aj, A-Aj, A+Aj, -A+Aj, A-Aj, A-Aj, A-Aj, -A+Aj, -A+Aj, -A+Aj, -A-Aj, A+Aj, -A-Aj, -A-Aj, A-Aj, A-Aj, A-Aj, A-Aj, A+Aj, -A+Aj, A+Aj, -A-Aj, -A-Aj, A-Aj, -A+Aj, A+Aj, A+Aj, -A+Aj, -A-Aj, A-Aj, A+Aj, -A-Aj, A+Aj, -A+Aj, -A-Aj, A+Aj, A-Aj, A+Aj, -A+Aj |

**Table 11-2**

| Index | Polarization | Pilot sequence |
|---|---|---|
| 1 | Polarization 1 | -A-Aj, A+Aj, -A-Aj, -A-Aj, A-Aj, A-Aj, A-Aj, A+Aj, A-Aj, -A-Aj, -A-Aj, -A-Aj, A+Aj, -A+Aj, A+Aj, A+Aj, A-Aj, A-Aj, -A+Aj, A+Aj, A+Aj, -A-Aj, -A+Aj, -A+Aj, A+Aj, A-Aj, A+Aj, -A-Aj, -A+Aj, A+Aj, -A-Aj, A-Aj, A+Aj, -A+Aj, A-Aj, A-Aj, -A-Aj, A-Aj, -A+Aj, -A-Aj, -A+Aj, A-Aj, -A+Aj, -A-Aj, A+Aj, -A+Aj, -A+Aj, -A-Aj, A-Aj, A-Aj, -A-Aj, -A-Aj, A-Aj, -A-Aj, -A+Aj, A+Aj, A-Aj, -A+Aj, A+Aj, -A+Aj, A+Aj, -A+Aj, -A+Aj, A-Aj, -A+Aj |
| | Polarization 2 | -A+Aj, A-Aj, -A+Aj, -A+Aj, A+Aj, A+Aj, A+Aj, A-Aj, A+Aj, -A+Aj, -A+Aj, -A+Aj, A-Aj, -A-Aj, A-Aj, A-Aj, A+Aj, A+Aj, -A-Aj, A-Aj, A-Aj, -A+Aj, -A-Aj, -A-Aj, A-Aj, A+Aj, A-Aj, -A+Aj, -A-Aj, A-Aj, -A+Aj, A+Aj, A-Aj, -A-Aj, A+Aj, A+Aj, -A+Aj, A+Aj, -A-Aj, -A+Aj, -A-Aj, A+Aj, -A-Aj, -A+Aj, A-Aj, -A-Aj, -A-Aj, -A+Aj, A+Aj, A+Aj, -A+Aj, -A+Aj, A+Aj, -A+Aj, -A-Aj, A-Aj, A+Aj, -A-Aj, A-Aj, -A-Aj, A-Aj, -A-Aj, -A-Aj, A+Aj, -A-Aj |

(continued)

| Index | Polarization | Pilot sequence |
|---|---|---|
| 2 | Polarization 1 | -A-Aj, A+Aj, -A-Aj, -A-Aj, A-Aj, A-Aj, A-Aj, A+Aj, A-Aj, -A-Aj, -A-Aj, -A-Aj, A+Aj, -A+Aj, A+Aj, A+Aj, A-Aj, A-Aj, -A+Aj, A+Aj, A+Aj, -A-Aj, -A+Aj, -A+Aj, A+Aj, A-Aj, A+Aj, -A-Aj, -A+Aj, A+Aj, -A-Aj, A-Aj, A+Aj, -A+Aj, A-Aj, A-Aj, -A-Aj, A-Aj, -A+Aj, -A-Aj, -A+Aj, A-Aj, -A+Aj, -A-Aj, A+Aj, -A+Aj, -A+Aj, -A-Aj, A-Aj, A-Aj, -A-Aj, -A-Aj, A-Aj, -A-Aj, -A+Aj, A+Aj, A-Aj, -A+Aj, A+Aj, -A+Aj, A+Aj, -A+Aj, -A+Aj, A-Aj, -A+Aj |
| | Polarization 2 | A-Aj, -A+Aj, A-Aj, A-Aj, -A-Aj, -A-Aj, -A-Aj, -A+Aj, -A-Aj, A-Aj, A-Aj, A-Aj, -A+Aj, A+Aj, -A+Aj, -A+Aj, -A-Aj, -A-Aj, A+Aj, -A+Aj, -A+Aj, A-Aj, A+Aj, A+Aj, -A+Aj, -A-Aj, -A+Aj, A-Aj, A+Aj, - A+Aj, A-Aj, -A-Aj, -A+Aj, A+Aj, -A-Aj, -A-Aj, A-Aj, -A-Aj, A+Aj, A-Aj, A+Aj, -A-Aj, A+Aj, A-Aj, - A+Aj, A+Aj, A+Aj, A-Aj, -A-Aj, -A-Aj, A-Aj, A-Aj, -A-Aj, A-Aj, A+Aj, -A+Aj, -A-Aj, A+Aj, -A+Aj, A+Aj, -A+Aj, A+Aj, A+Aj, -A-Aj, A+Aj |
| 3 | Polarization 1 | A+Aj, -A-Aj, A+Aj, A+Aj, -A+Aj, -A+Aj, -A+Aj, -A-Aj, -A+Aj, A+Aj, A+Aj, A+Aj, -A-Aj, A-Aj, -A-Aj, -A-Aj, -A+Aj, -A+Aj, A-Aj, -A-Aj, -A-Aj, A+Aj, A-Aj, A-Aj, -A-Aj, -A+Aj, -A-Aj, A+Aj, A-Aj, - A-Aj, A+Aj, -A+Aj, -A-Aj, A-Aj, -A+Aj, -A+Aj, A+Aj, -A+Aj, A-Aj, A+Aj, A-Aj, -A+Aj, A-Aj, A+Aj, -A-Aj, A-Aj, A-Aj, A+Aj, -A+Aj, -A+Aj, A+Aj, A+Aj, -A+Aj, A+Aj, A-Aj, -A-Aj, -A+Aj, A-Aj, -A-Aj, A-Aj, -A-Aj, A-Aj, A-Aj, -A+Aj, A-Aj |
| | Polarization 2 | -A+Aj, A-Aj, -A+Aj, -A+Aj, A+Aj, A+Aj, A+Aj, A-Aj, A+Aj, -A+Aj, -A+Aj, -A+Aj, A-Aj, -A-Aj, A-Aj, A-Aj, A+Aj, A+Aj, -A-Aj, A-Aj, A-Aj, -A+Aj, -A-Aj, -A-Aj, A-Aj, A+Aj, A-Aj, -A+Aj, -A-Aj, A-Aj, -A+Aj, A+Aj, A-Aj, -A-Aj, A+Aj, A+Aj, -A+Aj, A+Aj, -A-Aj, -A+Aj, -A-Aj, A+Aj, -A-Aj, -A+Aj, A-Aj, -A-Aj, -A-Aj, -A+Aj, A+Aj, A+Aj, -A+Aj, -A+Aj, A+Aj, -A+Aj, -A-Aj, A-Aj, A+Aj, -A-Aj, A-Aj, -A-Aj, A-Aj, -A-Aj, -A-Aj, A+Aj, -A-Aj |
| 4 | Polarization 1 | A+Aj, -A-Aj, A+Aj, A+Aj, -A+Aj, -A+Aj, -A+Aj, -A-Aj, -A+Aj, A+Aj, A+Aj, A+Aj, -A-Aj, A-Aj, -A-Aj, -A-Aj, -A+Aj, -A+Aj, A-Aj, -A-Aj, -A-Aj, A+Aj, A-Aj, A-Aj, -A-Aj, -A+Aj, -A-Aj, A+Aj, A-Aj, - A-Aj, A+Aj, -A+Aj, -A-Aj, A-Aj, -A+Aj, -A+Aj, A+Aj, -A+Aj, A-Aj, A+Aj, A-Aj, -A+Aj, A-Aj, A+Aj, -A-Aj, A-Aj, A-Aj, A+Aj, -A+Aj, -A+Aj, A+Aj, A+Aj, -A+Aj, A+Aj, A-Aj, -A-Aj, -A+Aj, A-Aj, -A-Aj, A-Aj, -A-Aj, A-Aj, A-Aj, -A+Aj, A-Aj |
| | Polarization 2 | A-Aj, -A+Aj, A-Aj, A-Aj, -A-Aj, -A-Aj, -A-Aj, -A+Aj, -A-Aj, A-Aj, A-Aj, A-Aj, -A+Aj, A+Aj, -A+Aj, -A+Aj, -A-Aj, -A-Aj, A+Aj, -A+Aj, -A+Aj, A-Aj, A+Aj, A+Aj, -A+Aj, -A-Aj, -A+Aj, A-Aj, A+Aj, - A+Aj, A-Aj, -A-Aj, -A+Aj, A+Aj, -A-Aj, -A-Aj, A-Aj, -A-Aj, A+Aj, A-Aj, A+Aj, -A-Aj, A+Aj, A-Aj, - A+Aj, A+Aj, A+Aj, A-Aj, -A-Aj, -A-Aj, A-Aj, A-Aj, -A-Aj, A-Aj, A+Aj, -A+Aj, -A-Aj, A+Aj, -A+Aj, A+Aj, -A+Aj, A+Aj, A+Aj, -A-Aj, A+Aj |
| 5 | Polarization 1 | -A+Aj, A+Aj, -A+Aj, -A+Aj, -A-Aj, -A+Aj, A+Aj, A+Aj, A-Aj, -A-Aj, -A+Aj, -A-Aj, A+Aj, -A-Aj, A+Aj, A-Aj, A+Aj, -A+Aj, A-Aj, -A-Aj, A+Aj, -A-Aj, -A-Aj, -A+Aj, A-Aj, A+Aj, A+Aj, A-Aj, A+Aj, A-Aj, -A+Aj, -A+Aj, -A+Aj, -A+Aj, A-Aj, -A+Aj, -A-Aj, A-Aj, A+Aj, -A+Aj, -A+Aj, A+Aj, A-Aj, A- Aj, -A+Aj, A+Aj, A-Aj, -A+Aj, A-Aj, A-Aj, -A-Aj, -A-Aj, -A-Aj, A-Aj, A-Aj, -A+Aj, -A-Aj, -A+Aj, - A-Aj, -A-Aj, A+Aj, A-Aj, -A-Aj, A-Aj, A+Aj |
| | Polarization 2 | -A-Aj, A-Aj, -A-Aj, -A-Aj, -A+Aj, -A-Aj, A-Aj, A-Aj, A+Aj, -A+Aj, -A-Aj, -A+Aj, A-Aj, -A+Aj, A-Aj, A+Aj, A-Aj, -A-Aj, A+Aj, -A+Aj, A-Aj, -A+Aj, -A+Aj, -A-Aj, A+Aj, A-Aj, A-Aj, A+Aj, A-Aj, A+Aj, -A-Aj, -A-Aj, -A-Aj, -A-Aj, A+Aj, -A-Aj, -A+Aj, A+Aj, A-Aj, -A-Aj, -A-Aj, A-Aj, A+Aj, A+Aj, -A-Aj, A-Aj, A+Aj, -A-Aj, A+Aj, A+Aj, -A+Aj, -A+Aj, -A+Aj, A+Aj, A+Aj, -A-Aj, -A+Aj, -A-Aj, -A+Aj, -A+Aj, A-Aj, A+Aj, -A+Aj, A+Aj, A-Aj |
| 6 | Polarization 1 | -A+Aj, A+Aj, -A+Aj, -A+Aj, -A-Aj, -A+Aj, A+Aj, A+Aj, A-Aj, -A-Aj, -A+Aj, -A-Aj, A+Aj, -A-Aj, A+Aj, A-Aj, A+Aj, -A+Aj, A-Aj, -A-Aj, A+Aj, -A-Aj, -A-Aj, -A+Aj, A-Aj, A+Aj, A+Aj, A-Aj, A+Aj, A-Aj, -A+Aj, -A+Aj, -A+Aj, -A+Aj, A-Aj, -A+Aj, -A-Aj, A-Aj, A+Aj, -A+Aj, -A+Aj, A+Aj, A-Aj, A- Aj, -A+Aj, A+Aj, A-Aj, -A+Aj, A-Aj, A-Aj, -A-Aj, -A-Aj, -A-Aj, A-Aj, A-Aj, -A+Aj, -A-Aj, -A+Aj, - A-Aj, -A-Aj, A+Aj, A-Aj, -A-Aj, A-Aj, A+Aj |
| | Polarization 2 | A+Aj, -A+Aj, A+Aj, A+Aj, A-Aj, A+Aj, -A+Aj, -A+Aj, -A-Aj, A-Aj, A+Aj, A-Aj, -A+Aj, A-Aj, - A+Aj, -A-Aj, -A+Aj, A+Aj, -A-Aj, A-Aj, -A+Aj, A-Aj, A-Aj, A+Aj, -A-Aj, -A+Aj, -A+Aj, -A-Aj, - A+Aj, -A-Aj, A+Aj, A+Aj, A+Aj, A+Aj, -A-Aj, A+Aj, A-Aj, -A-Aj, -A+Aj, A+Aj, A+Aj, -A+Aj, -A- Aj, -A-Aj, A+Aj, -A+Aj, -A-Aj, A+Aj, -A-Aj, -A-Aj, A-Aj, A-Aj, A-Aj, -A-Aj, -A-Aj, A+Aj, A-Aj, A+Aj, A-Aj, A-Aj, -A+Aj, -A-Aj, A-Aj, -A-Aj, -A+Aj |

(continued)

| Index | Polarization | Pilot sequence |
|---|---|---|
| 7 | Polarization 1 | A-Aj, -A-Aj, A-Aj, A-Aj, A+Aj, A-Aj. -A-Aj, -A-Aj, -A+Aj, A+Aj, A-Aj, A+Aj, -A-Aj, A+Aj, -A-Aj, -A+Aj, -A-Aj, A-Aj, -A+Aj, A+Aj, -A-Aj, A+Aj, A+Aj, A-Aj, -A+Aj, -A-Aj, -A-Aj, -A+Aj, -A-Aj, -A+Aj, A-Aj, A-Aj, A-Aj, A-Aj, -A+Aj, A-Aj, A+Aj, -A+Aj, -A-Aj, A-Aj, A-Aj, -A-Aj, -A+Aj, -A+Aj, A-Aj, -A-Aj, -A+Aj, A-Aj, -A+Aj, -A+Aj, A+Aj, A+Aj, A+Aj, -A+Aj, -A+Aj, A-Aj, A+Aj, A-Aj, A+Aj, A+Aj, -A-Aj, -A+Aj, A+Aj, -A+Aj, -A-Aj |
|  | Polarization 2 | -A-Aj, A-Aj, -A-Aj, -A-Aj, -A+Aj, -A-Aj, A-Aj, A-Aj, A+Aj, -A+Aj, -A-Aj, -A+Aj, A-Aj, -A+Aj, A-Aj, A+Aj, A-Aj, -A-Aj, A+Aj, -A+Aj, A-Aj, -A+Aj, -A+Aj, -A-Aj, A+Aj, A-Aj, A-Aj, A+Aj, A-Aj, A+Aj, -A-Aj, -A-Aj, -A-Aj, -A-Aj, A+Aj, -A-Aj, -A+Aj, A+Aj, A-Aj, -A-Aj, -A-Aj, A-Aj, A+Aj, A+Aj, -A-Aj, A-Aj, A+Aj, -A-Aj, A+Aj, A+Aj, -A+Aj, -A+Aj, -A+Aj, A+Aj, A+Aj, -A-Aj, -A+Aj, -A-Aj, -A+Aj, -A+Aj, A-Aj, A+Aj, -A+Aj, A+Aj, A-Aj |
| 8 | Polarization 1 | A-Aj, -A-Aj, A-Aj, A-Aj, A+Aj, A-Aj. -A-Aj, -A-Aj, -A+Aj, A+Aj, A-Aj, A+Aj, -A-Aj, A+Aj, -A-Aj, -A+Aj, -A-Aj, A-Aj, -A+Aj, A+Aj, -A-Aj, A+Aj, A+Aj, A-Aj, -A+Aj, -A-Aj, -A-Aj, -A+Aj, -A-Aj, -A+Aj, A-Aj, A-Aj, A-Aj, A-Aj, -A+Aj, A-Aj, A+Aj, -A+Aj, -A-Aj, A-Aj, A-Aj, -A-Aj, -A+Aj, -A+Aj, A-Aj, -A-Aj, -A+Aj, A-Aj, -A+Aj, -A+Aj, A+Aj, A+Aj, A+Aj, -A+Aj, -A+Aj, A-Aj, A+Aj, A-Aj, A+Aj, A+Aj, -A-Aj, -A+Aj, A+Aj, -A+Aj, -A-Aj |
|  | Polarization 2 | A+Aj, -A+Aj, A+Aj, A+Aj, A-Aj, A+Aj, -A+Aj, -A+Aj, -A-Aj, A-Aj, A+Aj, A-Aj, -A+Aj, A-Aj, -A+Aj, -A-Aj, -A+Aj, A+Aj, -A-Aj, A-Aj, -A+Aj, A-Aj, A-Aj, A+Aj, -A-Aj, -A+Aj, -A+Aj, -A-Aj, -A+Aj, -A-Aj, A+Aj, A+Aj, A+Aj, A+Aj, -A-Aj, A+Aj, A-Aj, -A-Aj, -A+Aj, A+Aj, A+Aj, -A+Aj, -A-Aj, -A-Aj, A+Aj, -A+Aj, -A-Aj, A+Aj, -A-Aj, -A-Aj, A-Aj, A-Aj, A-Aj, -A-Aj, -A-Aj, A+Aj, A-Aj, A+Aj, A-Aj, A-Aj, -A+Aj, -A-Aj, A-Aj, -A-Aj, -A+Aj |
| 9 | Polarization 1 | -A-Aj, A+Aj, -A-Aj, -A-Aj, A+Aj, -A+Aj, -A-Aj, -A-Aj, A-Aj, A-Aj, -A+Aj, -A+Aj, A-Aj, A+Aj, -A-Aj, A-Aj, A-Aj, A-Aj, A+Aj, -A-Aj, -A+Aj, -A-Aj, -A-Aj, -A+Aj, -A-Aj, A+Aj, A+Aj, A-Aj, -A+Aj, A+Aj, -A-Aj, A-Aj, -A+Aj, -A-Aj, -A+Aj, A-Aj, -A+Aj, A-Aj, A+Aj, A+Aj, -A-Aj, -A-Aj, -A-Aj, A+Aj, A-Aj, A-Aj, A-Aj, -A-Aj, A-Aj, A+Aj, A-Aj, -A-Aj, A+Aj, A+Aj, -A+Aj, A+Aj, -A+Aj, A-Aj, A-Aj, A+Aj, A+Aj, A+Aj, A-Aj, A-Aj, -A+Aj |
|  | Polarization 2 | -A+Aj, A-Aj, -A+Aj, -A+Aj, A-Aj, -A-Aj, -A+Aj, -A+Aj, A+Aj, A+Aj, -A-Aj, -A-Aj, A+Aj, A-Aj, -A+Aj, A+Aj, A+Aj, A+Aj, A-Aj, -A+Aj, -A-Aj, -A+Aj, -A+Aj, -A-Aj, -A+Aj, A-Aj, A-Aj, A+Aj, -A-Aj, A-Aj, -A+Aj, A+Aj, -A-Aj, -A+Aj, -A-Aj, A+Aj, -A-Aj, A+Aj, A-Aj, A-Aj, -A+Aj, -A+Aj, -A+Aj, A-Aj, A+Aj, A+Aj, A+Aj, -A+Aj, A+Aj, A-Aj, A+Aj, -A+Aj, A-Aj, A-Aj, -A-Aj, A-Aj, -A-Aj, A+Aj, A+Aj, A-Aj, A-Aj, A-Aj, A+Aj, A+Aj, -A-Aj |
| 10 | Polarization 1 | -A-Aj, A+Aj, -A-Aj, -A-Aj, A+Aj, -A+Aj, -A-Aj, -A-Aj, A-Aj, A-Aj, -A+Aj, -A+Aj, A-Aj, A+Aj, -A-Aj, A-Aj, A-Aj, A-Aj, A+Aj, -A-Aj, -A+Aj, -A-Aj, -A-Aj, -A+Aj, -A-Aj, A+Aj, A+Aj, A-Aj, -A+Aj, A+Aj, -A-Aj, A-Aj, -A+Aj, -A-Aj, -A+Aj, A-Aj, -A+Aj, A-Aj, A+Aj, A+Aj, -A-Aj, -A-Aj, -A-Aj, A+Aj, A-Aj, A-Aj, A-Aj, -A-Aj, A-Aj, A+Aj, A-Aj, -A-Aj, A+Aj, A+Aj, -A+Aj, A+Aj, -A+Aj, A-Aj, A-Aj, A+Aj, A+Aj, A+Aj, A-Aj, A-Aj, -A+Aj |
|  | Polarization 2 | A-Aj, -A+Aj, A-Aj, A-Aj, -A+Aj, A+Aj, A-Aj, A-Aj, -A-Aj, -A-Aj, A+Aj, A+Aj, -A-Aj, -A+Aj, A-Aj, - A-Aj, -A-Aj, -A-Aj, -A+Aj, A-Aj, A+Aj, A-Aj, A-Aj, A+Aj, A-Aj, -A+Aj, -A+Aj, -A-Aj, A+Aj, -A+Aj, A-Aj, -A-Aj, A+Aj, A-Aj, A+Aj, -A-Aj, A+Aj, -A-Aj, -A+Aj, -A+Aj, A-Aj, A-Aj, A-Aj, -A+Aj, -A-Aj, -A-Aj, -A-Aj, A-Aj, -A-Aj, -A+Aj, -A-Aj, A-Aj, -A+Aj, A+Aj, -A+Aj, A+Aj, -A-Aj, -A-Aj, - A+Aj, -A+Aj, -A+Aj, -A-Aj, -A-Aj, A+Aj |
| 11 | Polarization 1 | A+Aj, -A-Aj, A+Aj, A+Aj, -A-Aj, A-Aj, A+Aj, A+Aj, -A+Aj, -A+Aj, A-Aj, A-Aj, -A+Aj, -A-Aj, A+Aj, -A+Aj, -A+Aj, -A+Aj, -A-Aj, A+Aj, A-Aj, A+Aj, A+Aj, A-Aj, A+Aj, -A-Aj, -A-Aj, -A+Aj, A-Aj, -A-Aj, A+Aj, -A+Aj, A-Aj, A+Aj, A-Aj, -A+Aj, A-Aj, -A+Aj, -A-Aj, -A-Aj, A+Aj, A+Aj, A+Aj, -A-Aj, - A+Aj, -A+Aj, -A+Aj, A+Aj, -A+Aj, -A-Aj, -A+Aj, A+Aj, -A-Aj, -A-Aj, A-Aj, -A-Aj, A-Aj, -A+Aj, - A+Aj, -A-Aj, -A-Aj, -A-Aj, -A+Aj, -A+Aj, A-Aj |
|  | Polarization 2 | -A+Aj, A-Aj, -A+Aj, -A+Aj, A-Aj, -A-Aj, -A+Aj, -A+Aj, A+Aj, A+Aj, -A-Aj, -A-Aj, A+Aj, A-Aj, -A+Aj, A+Aj, A+Aj, A+Aj, A-Aj, -A+Aj, -A-Aj, -A+Aj, -A+Aj, -A-Aj, -A+Aj, A-Aj, A-Aj, A+Aj, -A-Aj, A-Aj, -A+Aj, A+Aj, -A-Aj, -A+Aj, -A-Aj, A+Aj, -A-Aj, A+Aj, A-Aj, A-Aj, -A+Aj, -A+Aj, -A+Aj, A-Aj, A+Aj, A+Aj, A+Aj, -A+Aj, A+Aj, A-Aj, A+Aj, -A+Aj, A-Aj, A-Aj, -A-Aj, A-Aj, -A-Aj, A+Aj, A+Aj, A-Aj, A-Aj, A-Aj, A+Aj, A+Aj, -A-Aj |

(continued)

| Index | Polarization | Pilot sequence |
|---|---|---|
| 12 | Polarization 1 | A+Aj, -A-Aj, A+Aj, A+Aj, -A-Aj, A-Aj, A+Aj, A+Aj, -A+Aj, -A+Aj, A-Aj, A-Aj, -A+Aj, -A-Aj, A+Aj, -A+Aj, -A+Aj, -A+Aj, -A-Aj, A+Aj, A-Aj, A+Aj, A+Aj, A-Aj, A+Aj, -A-Aj, -A-Aj, -A+Aj, A-Aj, -A-Aj, A+Aj, -A+Aj, A-Aj, A+Aj, A-Aj, -A+Aj, A-Aj, -A+Aj, -A-Aj, -A-Aj, A+Aj, A+Aj, A+Aj, -A-Aj, - A+Aj, -A+Aj, -A+Aj, A+Aj, -A+Aj, -A-Aj, -A+Aj, A+Aj, -A-Aj, -A-Aj, A-Aj, -A-Aj, A-Aj, -A+Aj, - A+Aj, -A-Aj, -A-Aj, -A-Aj, -A+Aj, -A+Aj, A-Aj |
| | Polarization 2 | A-Aj, -A+Aj, A-Aj, A-Aj, -A+Aj, A+Aj, A-Aj, A-Aj, -A-Aj, -A-Aj, A+Aj, A+Aj, -A-Aj, -A+Aj, A-Aj, - A-Aj, -A-Aj, -A-Aj, -A+Aj, A-Aj, A+Aj, A-Aj, A-Aj, A+Aj, A-Aj, -A+Aj, -A+Aj, -A-Aj, A+Aj, -A+Aj, A-Aj, -A-Aj, A+Aj, A-Aj, A+Aj, -A-Aj, A+Aj, -A-Aj, -A+Aj, -A+Aj, A-Aj, A-Aj, A-Aj, -A+Aj, -A-Aj, -A-Aj, -A-Aj, A-Aj, -A-Aj, -A+Aj, -A-Aj, A-Aj, -A+Aj, -A+Aj, A+Aj, -A+Aj, A+Aj, -A-Aj, -A-Aj, -A+Aj, -A+Aj, -A+Aj, -A-Aj, -A-Aj, A+Aj |
| 13 | Polarization 1 | A+Aj, -A+Aj, -A-Aj, -A+Aj, -A-Aj, -A-Aj, -A+Aj, A+Aj, -A+Aj, A-Aj, A+Aj, -A-Aj, A+Aj, A+Aj, -A-Aj, A+Aj, A-Aj, A-Aj, -A-Aj, A+Aj, -A-Aj, A-Aj, A-Aj, A-Aj, -A-Aj, A+Aj, -A+Aj, -A+Aj, A-Aj, A+Aj, A+Aj, A-Aj, -A+Aj, A+Aj, A-Aj, A-Aj, -A+Aj, -A+Aj, A+Aj, A+Aj, -A-Aj, -A-Aj, -A+Aj, - A+Aj, A+Aj, -A-Aj, -A+Aj, A-Aj, A-Aj, -A-Aj, A+Aj, A+Aj, -A-Aj, A-Aj, -A+Aj, A-Aj, -A+Aj, -A-Aj, -A+Aj, A-Aj, -A-Aj, A-Aj, -A+Aj, -A+Aj, A-Aj |
| | Polarization 2 | A-Aj, A+Aj, A+Aj, A+Aj, -A+Aj, -A+Aj, A+Aj, A-Aj, A-Aj, A+Aj, -A-Aj, A+Aj, -A+Aj, -A+Aj, A+Aj, -A-Aj, A+Aj, A+Aj, A-Aj, A-Aj, A-Aj, -A-Aj, -A+Aj, -A-Aj, -A+Aj, -A-Aj, A-Aj, -A-Aj, A+Aj, A+Aj, A+Aj, -A-Aj, -A+Aj, -A+Aj, A+Aj, A-Aj, -A-Aj, A-Aj, -A-Aj, -A+Aj, -A-Aj, A-Aj, A-Aj, A-Aj, A+Aj, -A+Aj, -A+Aj, A-Aj, -A-Aj, -A+Aj, A-Aj, A-Aj, -A+Aj, -A-Aj, A+Aj, -A+Aj, -A+Aj, -A-Aj, A-Aj, A+Aj, -A-Aj, -A-Aj, -A-Aj, A+Aj. -A-Aj |
| 14 | Polarization 1 | A+Aj, -A+Aj, -A-Aj, A+Aj, -A+Aj, A-Aj, A-Aj, -A-Aj, -A+Aj, A-Aj, A-Aj, -A+Aj, -A-Aj, A-Aj, A+Aj, -A+Aj, A+Aj, A+Aj, A+Aj, A-Aj, -A+Aj, A+Aj, A-Aj, -A-Aj, A-Aj, -A+Aj, A+Aj, -A+Aj, -A-Aj, -A-Aj, -A+Aj, -A-Aj, A-Aj, A+Aj, A-Aj, -A+Aj, -A-Aj, -A+Aj, -A-Aj, -A+Aj, -A-Aj, A-Aj, A-Aj, -A+Aj, - A-Aj, A+Aj, -A-Aj, -A-Aj, -A-Aj, A-Aj, A+Aj, A+Aj, A+Aj, A-Aj, A+Aj, A-Aj, -A-Aj, -A+Aj, -A+Aj, -A+Aj, -A+Aj, A+Aj, A+Aj, A-Aj, A-Aj |
| | Polarization 2 | -A+Aj, A+Aj, A+Aj, A+Aj, A+Aj, A-Aj, A-Aj, -A+Aj, -A+Aj, A-Aj, -A-Aj, -A+Aj, -A-Aj, -A+Aj, A-Aj, A+Aj, -A-Aj, -A-Aj, A+Aj, A+Aj, A-Aj, A-Aj, A+Aj, -A-Aj, -A-Aj, -A+Aj, A-Aj, -A-Aj, A+Aj, -A-Aj, -A-Aj, A-Aj, A+Aj, -A+Aj, A-Aj, -A-Aj, A-Aj, -A+Aj, -A-Aj, A+Aj, A+Aj, A-Aj, A+Aj, -A-Aj, - A+Aj, A+Aj, -A-Aj, A-Aj, -A+Aj, -A+Aj, -A+Aj, -A+Aj, -A-Aj, -A+Aj, -A+Aj, -A-Aj, -A-Aj, A+Aj, A-Aj, A-Aj, -A+Aj, A+Aj, A+Aj, A-Aj, -A-Aj |
| 15 | Polarization 1 | -A+Aj, -A+Aj, -A+Aj, A+Aj, A+Aj, A-Aj, A-Aj, A-Aj, A-Aj, -A-Aj, -A+Aj, A+Aj, -A+Aj, A+Aj, A+Aj, A+Aj, -A+Aj, -A-Aj, -A-Aj, -A-Aj, A+Aj, -A-Aj, A-Aj, -A+Aj, -A+Aj, -A-Aj, A-Aj, -A-Aj, A-Aj, -A-Aj, A-Aj, -A+Aj, A+Aj, -A+Aj, -A-Aj, A-Aj, -A-Aj, -A-Aj, A-Aj, A+Aj, A-Aj, -A+Aj, -A-Aj, - A+Aj, A+Aj, A-Aj, -A+Aj, A+Aj, A+Aj, A+Aj, A-Aj, A+Aj, -A+Aj, -A-Aj, A-Aj, -A+Aj, -A+Aj, A-Aj, -A-Aj, -A+Aj, -A+Aj, A-Aj, A+Aj, -A-Aj, A-Aj |
| | Polarization 2 | -A+Aj, A+Aj, -A-Aj, -A-Aj, A-Aj, A-Aj, -A-Aj, A-Aj, A-Aj, A-Aj, A-Aj, -A+Aj, -A-Aj, A+Aj, A-Aj, - A-Aj, A+Aj, -A+Aj, A+Aj, A+Aj, -A-Aj, A-Aj, -A+Aj, -A-Aj, -A+Aj, A-Aj, A+Aj, -A+Aj, -A-Aj, -A- Aj, A+Aj, -A-Aj, -A+Aj, A-Aj, -A-Aj. -A-Aj, A+Aj, -A+Aj, -A+Aj, A+Aj, A+Aj, -A-Aj, -A-Aj, A+Aj, -A+Aj, A-Aj, -A-Aj, A-Aj, -A-Aj, -A+Aj, A-Aj, A-Aj, -A+Aj, -A+Aj, A+Aj, A+Aj, A+Aj, A+Aj, A- Aj, -A+Aj, A+Aj, -A+Aj, -A+Aj, A+Aj, -A-Aj |
| 16 | Polarization 1 | -A+Aj, -A+Aj, -A+Aj, A+Aj, A+Aj, A-Aj, A-Aj, A-Aj, A-Aj, -A-Aj, -A+Aj, A+Aj, -A+Aj, A+Aj, A+Aj, A+Aj, -A+Aj, -A-Aj, -A-Aj, -A-Aj, A+Aj, -A-Aj, A-Aj, -A+Aj, -A+Aj, -A-Aj, A-Aj, -A-Aj, A- Aj, -A-Aj, A-Aj, -A+Aj, A+Aj, -A+Aj, -A-Aj, A-Aj, -A-Aj, -A-Aj, A-Aj, A+Aj, A-Aj, -A+Aj, -A-Aj, - A+Aj, A+Aj, A-Aj, -A+Aj, A+Aj, A+Aj, A+Aj, A-Aj, A+Aj, -A+Aj, -A-Aj, A-Aj, -A+Aj, -A+Aj, A- Aj, -A-Aj, -A+Aj, -A+Aj, A-Aj, A+Aj, -A-Aj, A-Aj |
| | Polarization 2 | A+Aj, -A-Aj, -A-Aj, A-Aj, A-Aj, -A-Aj, A-Aj, A-Aj, A-Aj, A-Aj, -A+Aj, -A-Aj, A+Aj, A-Aj, -A-Aj, A+Aj, -A+Aj, A+Aj, A+Aj, -A-Aj, A-Aj, -A+Aj, -A-Aj, -A+Aj, A-Aj, A+Aj, -A+Aj, -A-Aj, -A-Aj, A+Aj, -A-Aj, -A+Aj, A-Aj, -A-Aj, -A-Aj, A+Aj, -A+Aj, -A+Aj, A+Aj, A+Aj, -A-Aj, -A-Aj, A+Aj, - A+Aj, A-Aj, -A-Aj, A-Aj, -A-Aj, -A+Aj, A-Aj, A-Aj, -A+Aj, -A+Aj, A+Aj, A+Aj, A+Aj, A+Aj, A-Aj, -A+Aj, A+Aj, -A+Aj, -A+Aj, A+Aj, -A-Aj, A+Aj |

(continued)

| Index | Polarization | Pilot sequence |
|---|---|---|
| 17 | Polarization 1 | -A+Aj, -A+Aj, -A+Aj, A+Aj, A+Aj, A-Aj, A-Aj, A-Aj, A-Aj, -A-Aj, -A+Aj, A+Aj, -A+Aj, A+Aj, A+Aj, A+Aj, -A+Aj, -A-Aj, -A-Aj, -A-Aj, A+Aj, -A-Aj, A-Aj, -A+Aj, -A+Aj, -A-Aj, A-Aj, -A-Aj, A-Aj, -A-Aj, A-Aj, -A+Aj, A+Aj, -A+Aj, -A-Aj, A-Aj, -A-Aj, -A-Aj, A-Aj, A+Aj, A-Aj, -A+Aj, -A-Aj, -A+Aj, A+Aj, A-Aj, -A+Aj, A+Aj, A+Aj, A+Aj, A-Aj, A+Aj, -A+Aj, -A-Aj, A-Aj, -A+Aj, -A+Aj, A-Aj, -A-Aj, -A+Aj, -A+Aj, A-Aj, A+Aj, -A-Aj, A-Aj |
| | Polarization 2 | A+Aj, -A-Aj, -A+Aj, A+Aj, A+Aj, A-Aj, -A+Aj, -A+Aj, A+Aj, -A-Aj, -A-Aj, A-Aj, A-Aj, -A-Aj, A-Aj, A-Aj, A-Aj, A-Aj, -A+Aj, -A-Aj, A+Aj, A-Aj, -A-Aj, A+Aj, -A+Aj, A+Aj, A+Aj, -A-Aj, A-Aj, -A+Aj, -A-Aj, -A+Aj, A-Aj, A+Aj, -A+Aj, -A-Aj, -A-Aj, A+Aj, -A-Aj, -A+Aj, A-Aj, -A-Aj, -A-Aj, A+Aj, - A+Aj, -A+Aj, A+Aj, A+Aj, -A-Aj, -A-Aj, A+Aj, -A+Aj, A-Aj, -A-Aj, A-Aj, -A-Aj, -A+Aj, A-Aj, A-Aj, -A+Aj, -A+Aj, A+Aj, A+Aj, A+Aj, A+Aj |

(5) It is assumed that $N_{PS}$ = 74, and the pilot sequence is one item in the following Table 12-1. Alternatively, any item is selected from the following Table 12-2 as a pilot sequence in one polarization, and any item is selected from the following Table 12-3 as a pilot sequence in the other polarization. Alternatively, any item is selected from the following Table 12-4 as a pilot sequence in one polarization, and any item is selected from the following Table 12-5 as a pilot sequence in the other polarization.

**Table 12-1**

| Index | Polarization | Pilot sequence |
|---|---|---|
| 1 | Polarization 1 | -A-Aj, -A-Aj, -A+Aj, -A+Aj, A+Aj, A-Aj, -A+Aj, A+Aj, A+Aj, -A-Aj, A+Aj, -A+Aj, A+Aj, A-Aj, A+Aj, -A-Aj, A-Aj, A-Aj, A+Aj, -A+Aj, -A-Aj, A+Aj, -A+Aj, -A+Aj, -A+Aj, A-Aj, A-Aj, A-Aj, A-Aj, -A-Aj, - A-Aj, A-Aj, A-Aj, A-Aj, -A+Aj, -A-Aj, -A+Aj, -A-Aj, -A+Aj, A+Aj, A+Aj, A+Aj, A-Aj, -A+Aj, -A-Aj, A-Aj, -A-Aj, -A-Aj, -A+Aj, -A-Aj, A-Aj, -A-Aj, A-Aj, A+Aj, A+Aj, -A+Aj, -A+Aj, A-Aj, A+Aj, -A+Aj, -A+Aj, -A-Aj, -A+Aj, -A+Aj, A-Aj, A+Aj, A+Aj, -A-Aj, A+Aj, -A-Aj, A-Aj, A+Aj, -A-Aj, A-Aj |
| | Polarization 2 | -A+Aj, A-Aj, -A+Aj, -A-Aj, -A+Aj, -A+Aj, -A-Aj, A-Aj, -A-Aj, -A+Aj, -A-Aj, -A+Aj, -A+Aj, A-Aj, -A-Aj, A+Aj, A-Aj, -A+Aj, -A+Aj, -A+Aj, -A-Aj, -A-Aj, A-Aj, -A+Aj, A+Aj, A-Aj, A+Aj, A+Aj, -A+Aj, - A-Aj, A+Aj, A-Aj, A-Aj, A+Aj, A-Aj, -A+Aj, -A-Aj, A-Aj, A+Aj, -A-Aj, A+Aj, A-Aj, A+Aj, A+Aj, - A+Aj, A+Aj, A+Aj, -A-Aj, -A-Aj, A-Aj, -A+Aj, A-Aj, -A-Aj, A-Aj, A-Aj, -A+Aj, A+Aj, -A- Aj, -A-Aj, A-Aj, A+Aj, -A-Aj, A+Aj, -A+Aj, A+Aj, -A+Aj, A+Aj, A-Aj, -A-Aj, A+Aj, -A-Aj, A-Aj, -A-Aj, A+Aj |
| 2 | Polarization 1 | -A-Aj, -A+Aj, -A+Aj, A+Aj, A-Aj, -A+Aj, A+Aj, A+Aj, -A-Aj, A+Aj, -A+Aj, A+Aj, A-Aj, A+Aj, -A- Aj, A-Aj, A-Aj, A+Aj, -A+Aj, -A-Aj, A+Aj, -A+Aj, -A+Aj, -A+Aj, A-Aj, A-Aj, A-Aj, A-Aj, -A-Aj, -A-Aj, A-Aj, A-Aj, A-Aj, -A+Aj, -A-Aj, -A+Aj, -A-Aj, -A+Aj, A+Aj, A+Aj, A+Aj, A-Aj, -A+Aj, -A- Aj, A-Aj, - A-Aj, -A-Aj, -A+Aj, -A-Aj, A-Aj, -A-Aj, A-Aj, A+Aj, A+Aj, -A+Aj, -A+Aj, A-Aj, A+Aj, -A+Aj, -A+Aj, -A-Aj, -A+Aj, -A+Aj, A-Aj, A+Aj, A+Aj, -A-Aj, A+Aj, -A-Aj, A-Aj, A+Aj, -A-Aj, A- Aj, -A-Aj |
| | Polarization 2 | -A+Aj, A-Aj, -A+Aj, -A-Aj, -A+Aj, -A+Aj, -A-Aj, A-Aj, -A-Aj, -A+Aj, -A-Aj, -A+Aj, -A+Aj, A-Aj, -A-Aj, A+Aj, A-Aj, -A+Aj, -A+Aj, -A+Aj, -A-Aj, -A-Aj, A-Aj, -A+Aj, A+Aj, A-Aj, A+Aj, A+Aj, -A+Aj, - A-Aj, A+Aj, A-Aj, A-Aj, A+Aj, A-Aj, -A+Aj, -A-Aj, A-Aj, A+Aj, -A-Aj, A+Aj, A-Aj, A+Aj, A+Aj, - A+Aj, A+Aj, A+Aj, -A-Aj, -A-Aj, A-Aj, -A+Aj, A-Aj, -A-Aj, A-Aj, A-Aj, -A+Aj, A+Aj, -A- Aj, -A-Aj, A-Aj, A+Aj, -A-Aj, A+Aj, -A+Aj, A+Aj, -A+Aj, A+Aj, A-Aj, -A-Aj, A+Aj, -A-Aj, A-Aj, -A-Aj, A+Aj |

(continued)

| Index | Polarization | Pilot sequence |
|---|---|---|
| 3 | Polarization 1 | -A+Aj, -A+Aj, A+Aj, -A+Aj, A+Aj, -A+Aj, A+Aj, -A-Aj, -A-Aj, -A-Aj, -A-Aj, -A+Aj, -A-Aj, A-Aj, -A-Aj, -A+Aj, A-Aj, A-Aj, A-Aj, A-Aj, -A+Aj, A-Aj, A-Aj, -A-Aj, A-Aj, A-Aj, A-Aj, -A+Aj, -A-Aj, A+Aj, - A-Aj, A-Aj, -A+Aj, A+Aj, -A-Aj, -A+Aj, A+Aj, A+Aj, A+Aj, -A+Aj, A-Aj, -A+Aj, -A-Aj, A+Aj, -A+Aj, A-Aj, A+Aj, A+Aj, -A+Aj, A+Aj, -A+Aj, -A+Aj, -A+Aj, -A-Aj, -A-Aj, A+Aj, -A-Aj, -A+Aj, A+Aj, -A-Aj, A-Aj, A+Aj, A-Aj, A+Aj, A+Aj, -A-Aj, A-Aj, -A-Aj, -A+Aj, -A-Aj, A+Aj, A-Aj, A-Aj, A-Aj |
| | Polarization 2 | -A-Aj, A+Aj, A-Aj, A-Aj, A+Aj, A+Aj, -A+Aj, -A+Aj, A+Aj, A+Aj, -A+Aj, A+Aj, A+Aj, A+Aj, A+Aj, - A-Aj, A+Aj, -A-Aj, -A-Aj, A-Aj, A-Aj, -A-Aj, A-Aj, -A+Aj, A+Aj, A+Aj, -A-Aj, -A+Aj, A+Aj, -A+Aj, A-Aj, -A+Aj, A-Aj, A-Aj, -A+Aj, A-Aj, -A-Aj, A-Aj, -A-Aj, A-Aj, -A+Aj, A-Aj, -A-Aj, -A-Aj, -A+Aj, A-Aj, -A+Aj, -A+Aj, -A+Aj, -A+Aj, -A-Aj, A-Aj, A-Aj, -A-Aj, -A+Aj, -A-Aj, -A+Aj, A+Aj, A-Aj, A-Aj, -A-Aj, A-Aj, -A-Aj, A+Aj, -A+Aj, -A-Aj, -A-Aj, -A+Aj, A+Aj, -A-Aj, A+Aj, A+Aj, -A-Aj, A+Aj |
| 4 | Polarization 1 | -A+Aj, A-Aj, -A-Aj, A+Aj, A-Aj, A-Aj, A+Aj, A+Aj, -A+Aj, -A+Aj, A+Aj, A+Aj, -A+Aj, A+Aj, A+Aj, A+Aj, A+Aj, -A-Aj, A+Aj, -A-Aj, -A-Aj, A-Aj, A-Aj, -A-Aj, A-Aj, -A+Aj, A+Aj, A+Aj, -A-Aj, -A+Aj, A+Aj, -A+Aj, A-Aj, -A+Aj, A-Aj, A-Aj, -A+Aj, A-Aj, -A-Aj, A-Aj, -A-Aj, A-Aj, -A+Aj, A-Aj, -A-Aj, - A-Aj, -A+Aj, A-Aj, -A+Aj, -A+Aj, -A+Aj, -A+Aj, -A-Aj, A-Aj, A-Aj, -A-Aj, -A+Aj, -A-Aj, -A+Aj, A+Aj, A-Aj, A-Aj, -A-Aj, A-Aj, -A-Aj, A+Aj, -A+Aj, -A-Aj, -A-Aj, -A+Aj, A+Aj, -A-Aj, A+Aj, A+Aj |
| | Polarization 2 | A+Aj, -A-Aj, A-Aj, A-Aj, -A-Aj, A+Aj, -A+Aj, -A+Aj, A+Aj, -A+Aj, A+Aj, -A+Aj, A+Aj, -A-Aj, -A-Aj, -A-Aj, -A-Aj, -A+Aj, -A-Aj, A-Aj, -A-Aj, -A+Aj, A-Aj, A-Aj, A-Aj, A-Aj, -A+Aj, A-Aj, A-Aj, -A-Aj, A-Aj, A-Aj, A-Aj, -A+Aj, -A-Aj, A+Aj, -A-Aj, A-Aj, -A+Aj, A+Aj, -A-Aj, -A+Aj, A+Aj, A+Aj, A+Aj, -A+Aj, A-Aj, -A+Aj, -A-Aj, A+Aj, -A+Aj, A-Aj, A+Aj, A+Aj, -A+Aj, A+Aj, -A+Aj, -A+Aj, - A+Aj, -A-Aj, -A-Aj, A+Aj, -A-Aj, -A+Aj, A+Aj, -A-Aj, A-Aj, A+Aj, A-Aj, A+Aj, A+Aj, -A-Aj, A-Aj, - A-Aj |
| 5 | Polarization 1 | -A+Aj, -A+Aj, -A+Aj, A+Aj, -A-Aj, A-Aj, -A-Aj, -A+Aj, -A-Aj, A+Aj, A+Aj, -A+Aj, A+Aj, -A+Aj, -A-Aj, A+Aj, A-Aj, -A-Aj, A+Aj, -A-Aj, -A-Aj, A-Aj, A-Aj, A-Aj, A+Aj, A-Aj, A+Aj, A+Aj, -A+Aj, A-Aj, A+Aj, -A-Aj, A-Aj, -A+Aj, A-Aj, A+Aj, A+Aj, A+Aj, A-Aj, -A-Aj, A+Aj, A-Aj, -A+Aj, -A-Aj, A+Aj, - A-Aj, A-Aj, -A+Aj, -A+Aj, -A+Aj, -A-Aj, -A+Aj, -A+Aj, A-Aj, -A+Aj, -A+Aj, -A+Aj, -A+Aj, A-Aj, -A-Aj, -A+Aj, -A-Aj, A-Aj, -A-Aj, -A-Aj, -A-Aj, -A-Aj, A+Aj, A-Aj, A+Aj, A-Aj, A+Aj, A-Aj, A-Aj |
| | Polarization 2 | A+Aj, -A-Aj, A+Aj, A+Aj, -A-Aj, A+Aj, A-Aj, -A-Aj, -A-Aj, A-Aj, A+Aj, -A-Aj, -A+Aj, -A-Aj, -A+Aj, -A+Aj, A+Aj, A-Aj, -A-Aj, A-Aj, -A-Aj, -A+Aj, -A+Aj, -A-Aj, A-Aj, A-Aj, A-Aj, A-Aj, -A+Aj, A-Aj, - A-Aj, -A-Aj, -A+Aj, A-Aj, -A+Aj, -A-Aj, -A+Aj, A-Aj, -A+Aj, A+Aj, A-Aj, -A-Aj, A+Aj, A+Aj, -A-Aj, -A+Aj, -A-Aj, -A+Aj, -A+Aj, -A-Aj, -A-Aj, A+Aj, -A-Aj, A+Aj, A+Aj, A+Aj, A+Aj, -A-Aj, A+Aj, A+Aj, A-Aj, A-Aj, A+Aj, A+Aj, -A+Aj, -A+Aj, A+Aj, -A-Aj |
| 6 | Polarization 1 | A+Aj, A+Aj, -A-Aj, A+Aj, A-Aj, -A-Aj, -A-Aj, A-Aj, A+Aj, -A-Aj, -A+Aj, -A-Aj, -A+Aj, -A+Aj, A+Aj, A-Aj, -A-Aj, A-Aj, -A-Aj, -A+Aj, -A+Aj, -A-Aj, A-Aj, A-Aj, A-Aj, A-Aj, -A+Aj, A-Aj, -A-Aj, -A-Aj, - A+Aj, A-Aj, -A+Aj, -A-Aj, -A+Aj, -A-Aj, -A+Aj, A-Aj, -A+Aj, -A+Aj, A-Aj, -A+Aj, A-Aj, A+Aj, A-Aj, -A-Aj, A+Aj, A+Aj, A-Aj, -A+Aj, -A-Aj, -A+Aj, -A+Aj, -A-Aj, -A-Aj, A+Aj, -A-Aj, A+Aj, A+Aj, A+Aj, A+Aj, -A-Aj, A+Aj, A+Aj, A-Aj, -A-Aj, A+Aj, A+Aj, -A+Aj, -A+Aj, A+Aj, A-Aj, -A-Aj, -A+Aj, A-Aj |
| | Polarization 2 | -A-Aj, -A+Aj, -A-Aj, A+Aj, A+Aj, -A+Aj, A+Aj, -A+Aj, -A-Aj, A+Aj, A-Aj, -A-Aj, A+Aj, -A-Aj, -A-Aj, A-Aj, A-Aj, A-Aj, A+Aj, A-Aj, A+Aj, A+Aj, -A+Aj, A-Aj, A+Aj, -A-Aj, A-Aj, -A+Aj, A-Aj, A+Aj, A+Aj, A+Aj, -A-Aj, -A-Aj, A+Aj, A-Aj, -A+Aj, -A-Aj, A+Aj, -A-Aj, A-Aj, -A+Aj, -A+Aj, -A+Aj, -A-Aj, -A+Aj, -A+Aj, A-Aj, -A+Aj, -A+Aj, A-Aj, -A+Aj, -A-Aj, A-Aj, -A-Aj, -A-Aj, -A-Aj, -A-Aj, A+Aj, A-Aj, A+Aj, A-Aj, A+Aj, A-Aj, A-Aj, A+Aj, -A-Aj, -A+Aj, -A+Aj, -A-Aj, A+Aj |

(continued)

| Index | Polarization | Pilot sequence |
|---|---|---|
| 7 | Polarization 1 | -A-Aj, -A+Aj, -A-Aj, A+Aj, -A+Aj, -A-Aj, A+Aj, -A-Aj, A+Aj, A+Aj, -A+Aj, A-Aj, A-Aj, -A-Aj, A-Aj, A-Aj, A+Aj, -A+Aj, A-Aj, A-Aj, A+Aj, A+Aj, -A+Aj, -A-Aj, -A+Aj, -A-Aj, A-Aj, -A-Aj, -A-Aj, -A+Aj, -A-Aj, A-Aj, -A+Aj, A+Aj, A+Aj, A+Aj, A-Aj, -A-Aj, A-Aj, -A-Aj, A-Aj, -A+Aj, -A+Aj, -A+Aj, -A-Aj, -A-Aj, -A+Aj, -A+Aj, -A+Aj, -A+Aj, A-Aj, A-Aj, A-Aj, A+Aj, -A-Aj, A-Aj, A+Aj, -A+Aj, -A+Aj, -A-Aj, A+Aj, -A+Aj, A+Aj, A-Aj, A+Aj, -A-Aj, A+Aj, A+Aj, A-Aj, -A+Aj, A+Aj, A-Aj, A-Aj, -A-Aj |
| | Polarization 2 | A+Aj, -A-Aj, -A+Aj, -A-Aj, A+Aj, -A-Aj, -A+Aj, A+Aj, A-Aj, A+Aj, A-Aj, A+Aj, -A-Aj, A+Aj, -A+Aj, -A-Aj, -A-Aj, A+Aj, A-Aj, -A+Aj, -A+Aj, -A-Aj, -A+Aj, A-Aj, -A+Aj, -A-Aj, -A-Aj, A+Aj, A+Aj, A-Aj, A+Aj, A+Aj, -A+Aj, A+Aj, -A-Aj, A+Aj, -A+Aj, -A-Aj, A-Aj, -A+Aj, A+Aj, -A+Aj, -A+Aj, A+Aj, -A-Aj, A-Aj, A+Aj, A+Aj, -A+Aj, A+Aj, A-Aj, -A+Aj, -A-Aj, -A-Aj, A-Aj, A-Aj, A-Aj, -A+Aj, A+Aj, -A-Aj, -A+Aj, A-Aj, A-Aj, -A-Aj, A-Aj, -A-Aj, -A+Aj, -A-Aj, A-Aj, A-Aj, -A-Aj, A-Aj, -A+Aj, A-Aj |
| 8 | Polarization 1 | -A+Aj, -A-Aj, A+Aj, -A+Aj, -A-Aj, A+Aj, -A-Aj, A+Aj, A+Aj, -A+Aj, A-Aj, A-Aj, -A-Aj, A-Aj, A-Aj, A+Aj, -A+Aj, A-Aj, A-Aj, A+Aj, A+Aj, -A+Aj, -A-Aj, -A+Aj, -A-Aj, A-Aj, -A-Aj, -A-Aj, -A+Aj, -A-Aj, A-Aj, -A+Aj, A+Aj, A+Aj, A+Aj, A-Aj, -A-Aj, A-Aj, -A-Aj, A-Aj, -A+Aj, -A+Aj, -A+Aj, -A-Aj, -A-Aj, -A+Aj, -A+Aj, -A+Aj, -A+Aj, A-Aj, A-Aj, A-Aj, A+Aj, -A-Aj, A-Aj, A+Aj, -A+Aj, -A+Aj, -A-Aj, A+Aj, -A+Aj, A+Aj, A-Aj, A+Aj, -A-Aj, A+Aj, A+Aj, A-Aj, -A+Aj, A+Aj, A-Aj, A-Aj, -A-Aj, -A-Aj |
| | Polarization 2 | A+Aj, -A-Aj, -A+Aj, -A-Aj, A+Aj, -A-Aj, -A+Aj, A+Aj, A-Aj, A+Aj, A-Aj, A+Aj, -A-Aj, A+Aj, -A+Aj, -A-Aj, -A-Aj, A+Aj, A-Aj, -A+Aj, -A+Aj, -A-Aj, -A+Aj, A-Aj, -A+Aj, -A-Aj, -A-Aj, A+Aj, A+Aj, A-Aj, A+Aj, A+Aj, -A+Aj, A+Aj, -A-Aj, A+Aj, -A+Aj, -A-Aj, A-Aj, -A+Aj, A+Aj, -A+Aj, -A+Aj, A+Aj, -A-Aj, A-Aj, A+Aj, A+Aj, -A+Aj, A+Aj, A-Aj, -A+Aj, -A-Aj, -A-Aj, A-Aj, A-Aj, A-Aj, -A+Aj, A+Aj, -A-Aj, -A+Aj, A-Aj, A-Aj, -A-Aj, A-Aj, -A-Aj, -A+Aj, -A-Aj, A-Aj, A-Aj, -A-Aj, A-Aj, -A+Aj, A-Aj |

**Table 12-2**

| Index | Pilot sequence |
|---|---|
| 1 | -A-Aj, -A+Aj, -A+Aj, -A-Aj, A-Aj, A-Aj, -A-Aj, -A+Aj, A-Aj, A-Aj, -A-Aj, A-Aj, A+Aj, -A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, - A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, -A-Aj, - A+Aj, A-Aj, -A+Aj, -A+Aj, -A+Aj, -A-Aj, -A+Aj, A+Aj, A+Aj, A-Aj, -A-Aj, A-Aj, -A+Aj, A+Aj, -A+Aj, -A+Aj, A-Aj, A-Aj, A+Aj, A+Aj, -A-Aj, A-Aj, A+Aj |
| 2 | -A-Aj, A+Aj, A-Aj, A-Aj, A+Aj, -A+Aj, -A+Aj, A+Aj, A-Aj, -A+Aj, -A+Aj, A+Aj, -A+Aj, -A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, -A-Aj, -A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, - A+Aj, -A+Aj, -A-Aj, -A-Aj, A+Aj, -A+Aj |
| 3 | -A+Aj, -A-Aj, A+Aj, A-Aj, A-Aj, A+Aj, -A+Aj, -A+Aj, A+Aj, A-Aj, -A+Aj, -A+Aj, A+Aj, -A+Aj, -A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, -A-Aj, -A+Aj, -A-Aj, -A-Aj, -A-Aj, - A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj |
| 4 | A-Aj, A+Aj, -A-Aj, -A+Aj, -A+Aj, -A-Aj, A-Aj, A-Aj, -A-Aj, -A+Aj, A-Aj, A-Aj, -A-Aj, A-Aj, A+Aj, -A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj. A-Aj, -A+Aj, A-Aj, -A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj |

(continued)

| Index | Pilot sequence |
|-------|----------------|
| 5 | A+Aj, -A-Aj, -A+Aj, -A+Aj, -A-Aj, A-Aj, A-Aj, -A-Aj, -A+Aj, A-Aj, A-Aj, -A-Aj, A-Aj, A+Aj, -A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, - A+Aj, -A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, - A-Aj, -A+Aj, A-Aj, -A+Aj, -A+Aj, -A+Aj, -A-Aj, -A+Aj, A+Aj, A+Aj, -A-Aj, A-Aj, A-Aj, -A+Aj, A+Aj, -A+Aj, -A+Aj, -A-Aj, A-Aj, A+Aj, A+Aj, -A-Aj, A-Aj |
| 6 | A+Aj, A-Aj, A-Aj, A+Aj, -A+Aj, -A+Aj, A+Aj, A-Aj, -A+Aj, -A+Aj, A+Aj, -A+Aj, -A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, -A-Aj, -A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, - A+Aj, -A-Aj, -A-Aj, A+Aj, -A+Aj, -A-Aj |

**Table 12-3**

| Index | Pilot sequence |
|-------|----------------|
| 1 | -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, -A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, -A+Aj, -A-Aj, -A-Aj, -A-Aj, A+Aj, -A+Aj, A+Aj, A+Aj, -A-Aj, -A-Aj, -A+Aj, -A+Aj, A-Aj |
| 2 | -A+Aj, -A-Aj, -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, -A+Aj, -A-Aj, -A+Aj, -A-Aj, -A+Aj, A+Aj, -A-Aj, -A-Aj, A+Aj. -A-Aj, A+Aj, -A+Aj, A-Aj, A+Aj, A-Aj, A-Aj, A-Aj, A-Aj, - A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj, A+Aj, A-Aj |
| 3 | -A+Aj, A-Aj, A+Aj, A+Aj, A-Aj, -A-Aj, -A-Aj, A-Aj. A+Aj, -A-Aj, -A-Aj, A-Aj, -A-Aj, -A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, -A+Aj, -A-Aj, -A+Aj, -A+Aj, -A+Aj, - A+Aj, A-Aj, A+Aj, -A-Aj, A+Aj, A+Aj, A+Aj, A-Aj, A+Aj, -A+Aj, -A+Aj, -A-Aj, -A-Aj, -A-Aj, A+Aj, -A+Aj, A+Aj, A+Aj, -A-Aj, -A-Aj, -A+Aj, -A+Aj, A-Aj, -A-Aj |
| 4 | A-Aj, -A+Aj, -A-Aj, -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, - A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, - A-Aj, A+Aj, A+Aj, A-Aj, A-Aj, -A+Aj, A+Aj |
| 5 | A-Aj, A+Aj, A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, -A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, -A+Aj, -A-Aj, -A-Aj, -A-Aj, A+Aj, -A+Aj, A+Aj, A+Aj, -A-Aj, -A-Aj, -A+Aj, -A+Aj, A-Aj, -A-Aj, -A+Aj |
| 6 | A+Aj, A-Aj, -A+Aj, -A-Aj, -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, - A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj |

**Table 12-4**

| Index | Pilot sequence |
|---|---|
| 1 | -A-Aj, A-Aj, A+Aj, -A-Aj, -A-Aj, A-Aj, A-Aj, -A+Aj, -A+Aj, -A-Aj, -A+Aj, A-Aj, A-Aj, A-Aj, -A-Aj, -A-Aj, -A+Aj, A+Aj, -A+Aj, -A+Aj, -A+Aj, A-Aj, -A+Aj, A+Aj, -A-Aj, -A-Aj, -A-Aj, -A-Aj, A-Aj, -A-Aj, A+Aj, A-Aj, -A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj, -A+Aj, -A-Aj, A+Aj, A-Aj, A+Aj, -A-Aj, A-Aj, -A-Aj, -A+Aj, -A-Aj, A-Aj, A+Aj, A-Aj, A-Aj, -A+Aj, A+Aj, A-Aj, A-Aj, A+Aj, -A+Aj, -A+Aj, A+Aj |
| 2 | -A-Aj, A+Aj, A+Aj, -A+Aj, -A+Aj, A-Aj, A-Aj, A+Aj, A-Aj, -A+Aj, -A+Aj, -A+Aj, A+Aj, A+Aj, A-Aj, -A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, -A-Aj, A-Aj, A+Aj, A+Aj, -A-Aj, -A-Aj, A+Aj, -A-Aj, -A-Aj, -A+Aj, A-Aj, A+Aj, -A-Aj, -A+Aj, -A-Aj, A+Aj, -A+Aj, A+Aj, A-Aj, A+Aj, -A+Aj, -A-Aj, -A+Aj, -A+Aj, A-Aj, -A-Aj, -A+Aj, -A+Aj, -A-Aj, A-Aj, A-Aj, -A-Aj, A+Aj, -A+Aj |
| 3 | -A+Aj, -A-Aj, A+Aj, A+Aj, -A+Aj, -A+Aj, A-Aj, A-Aj, A+Aj, A-Aj, -A+Aj, -A+Aj, -A+Aj, A+Aj, A+Aj, A-Aj, -A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, -A-Aj, A-Aj, A+Aj, A+Aj, -A-Aj, -A-Aj, A+Aj, -A-Aj, -A-Aj, -A+Aj, A-Aj, A+Aj, -A-Aj, -A+Aj, -A-Aj, A+Aj, -A+Aj, A+Aj, A-Aj, A+Aj, -A+Aj, -A-Aj, -A+Aj, -A+Aj, A-Aj, -A-Aj, -A+Aj, -A+Aj, -A-Aj, A-Aj, A-Aj, -A-Aj, A+Aj |
| 4 | A-Aj, A+Aj, -A-Aj, -A-Aj, A-Aj, A-Aj, -A+Aj, -A+Aj, -A-Aj, -A+Aj, A-Aj, A-Aj, A-Aj, -A-Aj, -A-Aj, -A+Aj, A+Aj, -A+Aj, -A+Aj, -A+Aj, A-Aj, -A+Aj, A+Aj, -A-Aj, -A-Aj, -A-Aj, -A-Aj, A-Aj, -A-Aj, A+Aj, A-Aj, -A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj, - A+Aj, -A-Aj, A+Aj, A-Aj, A+Aj, -A-Aj, A-Aj, -A-Aj, -A+Aj, -A-Aj, A-Aj, A+Aj, A-Aj, A-Aj, -A+Aj, A+Aj, A-Aj, A-Aj, A+Aj, -A+Aj, -A+Aj, A+Aj, -A-Aj |
| 5 | A+Aj, -A-Aj, -A-Aj, A-Aj, A-Aj, -A+Aj, -A+Aj, -A-Aj, -A+Aj, A-Aj, A-Aj, A-Aj, -A-Aj, -A-Aj, -A+Aj, A+Aj, -A+Aj, - A+Aj, -A+Aj, A-Aj, -A+Aj, A+Aj, -A-Aj, -A-Aj, -A-Aj, -A-Aj, A-Aj, -A-Aj, A+Aj, A-Aj, -A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj, -A+Aj, - A-Aj, A+Aj, A-Aj, A+Aj, -A-Aj, A-Aj, -A-Aj, -A+Aj, -A-Aj, A-Aj, A+Aj, A-Aj, A-Aj, -A+Aj, A+Aj, A-Aj, A-Aj, A+Aj, -A+Aj, -A+Aj, A+Aj, -A-Aj, A-Aj |
| 6 | A+Aj, -A+Aj, -A-Aj, A+Aj, A+Aj, -A+Aj, -A+Aj, A-Aj, A-Aj, A+Aj, A-Aj, -A+Aj, -A+Aj, -A+Aj, A+Aj, A+Aj, A-Aj, - A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, A-Aj, -A-Aj, -A-Aj, A-Aj, A+Aj, A+Aj, -A-Aj, -A-Aj, A+Aj, -A-Aj, -A-Aj, - A+Aj, A-Aj, A+Aj, -A-Aj, -A+Aj, -A-Aj, A+Aj, -A+Aj, A+Aj, A-Aj, A+Aj, -A+Aj, -A-Aj, -A+Aj, -A+Aj, A-Aj, -A-Aj, -A+Aj, -A+Aj, -A-Aj, A-Aj, A-Aj, -A-Aj |

**Table 12-5**

| Index | Pilot sequence |
|---|---|
| 1 | -A-Aj, -A+Aj, A-Aj, A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, -A-Aj, -A+Aj, A+Aj, -A+Aj, A+Aj, -A+Aj, -A+Aj, A+Aj, A-Aj, A-Aj, -A+Aj, -A+Aj, A-Aj, -A+Aj, -A+Aj, - A-Aj, A+Aj, A-Aj, -A+Aj, -A-Aj, -A+Aj, A-Aj, -A-Aj, A-Aj, A+Aj, A-Aj, -A-Aj, -A+Aj, -A-Aj, -A-Aj, A+Aj, - A+Aj, -A-Aj, A-Aj, -A-Aj, -A+Aj, A+Aj, A+Aj, -A+Aj, A-Aj |
| 2 | -A+Aj, A-Aj, A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, - A-Aj, -A+Aj, A+Aj, -A+Aj, A+Aj, -A+Aj, -A+Aj, A+Aj, A-Aj, A-Aj, -A+Aj, -A+Aj, A-Aj, -A+Aj, -A+Aj, -A-Aj, A+Aj, A-Aj, -A+Aj, -A-Aj, -A+Aj, A-Aj, -A-Aj, A-Aj, A+Aj, A-Aj, -A-Aj, -A+Aj, -A-Aj, -A-Aj, A+Aj, -A+Aj, -A-Aj, -A-Aj, -A+Aj, A+Aj, A+Aj, -A+Aj, A-Aj, -A-Aj |
| 3 | -A+Aj, A+Aj, A-Aj, -A+Aj, -A+Aj, A+Aj, A+Aj, -A-Aj, -A-Aj, -A+Aj, -A-Aj, A+Aj, A+Aj, A+Aj, -A+Aj, -A+Aj, - A-Aj, A-Aj, -A-Aj, -A-Aj, -A-Aj, A+Aj, -A-Aj, A-Aj, -A+Aj, -A+Aj, -A+Aj, A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, -A-Aj, -A+Aj, -A+Aj, A-Aj, A-Aj, -A+Aj, A-Aj, A-Aj, A+Aj, -A-Aj, -A+Aj, A-Aj, A+Aj, A-Aj, -A+Aj, A+Aj, -A+Aj, -A-Aj, -A+Aj, A+Aj, A-Aj, A+Aj, A+Aj, - A-Aj, A-Aj, A+Aj, A+Aj, A-Aj, -A-Aj, -A-Aj, A-Aj |

(continued)

| Index | Pilot sequence |
|---|---|
| 4 | A-Aj, -A-Aj, -A+Aj, A-Aj, A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, -A-Aj, -A+Aj, A+Aj, -A+Aj, A+Aj, -A+Aj, -A+Aj, A+Aj, A-Aj, A-Aj, -A+Aj, -A+Aj, A-Aj, -A+Aj, -A+Aj, -A-Aj, A+Aj, A-Aj, -A+Aj, -A-Aj, -A+Aj, A-Aj, -A-Aj, A-Aj, A+Aj, A-Aj, -A-Aj, -A+Aj, -A-Aj, -A-Aj, A+Aj, -A+Aj, -A-Aj, -A-Aj, -A+Aj, A+Aj, A+Aj, -A+Aj |
| 5 | A-Aj, -A+Aj, -A+Aj, A+Aj, A+Aj, -A-Aj, -A-Aj, -A+Aj, -A-Aj, A+Aj, A+Aj, A+Aj, -A+Aj, -A+Aj, -A-Aj, A-Aj, - A-Aj, -A-Aj, -A-Aj, A+Aj, -A-Aj, A-Aj, -A+Aj, -A+Aj, -A+Aj, -A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, -A-Aj, -A+Aj, -A+Aj, A-Aj, A-Aj, -A+Aj, A-Aj, A-Aj, A+Aj, -A-Aj, -A+Aj, A-Aj, A+Aj, A-Aj, -A+Aj, A+Aj, -A+Aj, -A-Aj, -A+Aj, A+Aj, A-Aj, A+Aj, A+Aj, -A-Aj, A-Aj, A+Aj, A+Aj, A-Aj, -A-Aj, -A-Aj, A-Aj, -A+Aj, A+Aj |
| 6 | A+Aj, A-Aj, -A+Aj, -A+Aj, A+Aj, A+Aj, -A-Aj, -A-Aj, -A+Aj, -A-Aj, A+Aj, A+Aj, A+Aj, -A+Aj, -A+Aj, -A-Aj, A-Aj, -A-Aj, -A-Aj, -A-Aj, A+Aj, -A-Aj, A-Aj, -A+Aj. -A+Aj, -A+Aj, -A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, -A-Aj, -A+Aj, -A+Aj, A-Aj, A-Aj, -A+Aj, A-Aj, A-Aj, A+Aj, -A-Aj, -A+Aj, A-Aj, A+Aj, A-Aj, -A+Aj, A+Aj, -A+Aj, -A-Aj, -A+Aj, A+Aj, A-Aj, A+Aj, A+Aj, -A-Aj, A-Aj, A+Aj, A+Aj, A-Aj, -A-Aj, -A-Aj, A-Aj, -A+Aj |

(6) It is assumed that $N_{PS}$ = 76. If a remainder of $N_{TS}$ divided by 4 is 1, the pilot sequence is one item in the following Table 13-1. If a remainder of $N_{TS}$ divided by 4 is 3, the pilot sequence is one item in the following Table 13-1 or Table 13-2.

**Table 13-1**

| Index | Polarization | Pilot sequence |
|---|---|---|
| 1 | Polarization 1 | -A-Aj, A+Aj, A+Aj, A-Aj, -A+Aj, -A-Aj, -A+Aj, -A-Aj, -A-Aj, A-Aj, -A-Aj, A+Aj, -A-Aj, -A+Aj, -A+Aj, A-Aj, A-Aj, -A+Aj, A+Aj, A-Aj, -A-Aj, A-Aj, -A+Aj, -A+Aj, -A-Aj, -A-Aj, -A+Aj, -A-Aj, A+Aj, A-Aj, -A-Aj, - A+Aj, -A+Aj, -A+Aj, A-Aj, -A+Aj, -A+Aj, A+Aj, -A-Aj, -A+Aj, A-Aj, A-Aj, A- Aj, A+Aj, A-Aj, A-Aj, A+Aj, - A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj, - A+Aj, A-Aj, -A-Aj, -A-Aj, A+Aj, -A+Aj, A+Aj, -A+Aj, A+Aj, A-Aj, A+Aj, A-Aj, -A+Aj |
| | Polarization 2 | -A+Aj, A-Aj, A-Aj, A+Aj, -A-Aj, -A+Aj, -A-Aj, -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A- Aj, A+Aj, - A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj, -A-Aj, A-Aj, A+Aj, A-Aj, A+Aj, -A-Aj |
| 2 | Polarization 1 | -A-Aj, A+Aj, A+Aj, A-Aj, -A+Aj, -A-Aj, -A+Aj, -A-Aj, -A-Aj, A-Aj, -A-Aj, A+Aj, -A-Aj, -A+Aj, -A+Aj, A-Aj, A-Aj, -A+Aj, A+Aj, A-Aj, -A-Aj, A-Aj, -A+Aj, -A+Aj, -A-Aj, -A-Aj, -A+Aj, -A-Aj, A+Aj, A-Aj, -A-Aj, - A+Aj, -A+Aj, -A+Aj, A-Aj, -A+Aj, -A+Aj, A+Aj, -A-Aj, -A+Aj, A-Aj, A-Aj, A- Aj, A+Aj, A-Aj, A-Aj, A+Aj, - A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj, - A+Aj, A-Aj, -A-Aj, -A-Aj, A+Aj, -A+Aj, A+Aj, -A+Aj, A+Aj, A-Aj, A+Aj, A-Aj, -A+Aj |
| | Polarization 2 | A-Aj, -A+Aj, -A+Aj, -A-Aj, A+Aj, A-Aj, A+Aj, A-Aj, A-Aj, -A-Aj, A-Aj, -A+Aj, A-Aj, A+Aj, A+Aj, -A-Aj, - A-Aj, A+Aj, -A+Aj, -A-Aj, A-Aj, -A-Aj, A+Aj, A+Aj, A-Aj, A-Aj, A+Aj, A-Aj, -A+Aj, -A- Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, -A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj, A+Aj, -A+Aj, -A- Aj, -A+Aj, -A-Aj, A+Aj |

(continued)

| Index | Polarization | Pilot sequence |
|---|---|---|
| 3 | Polarization 1 | -A+Aj, A-Aj, A-Aj, A+Aj, -A-Aj, -A+Aj, -A-Aj, -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, - A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj, -A-Aj, A-Aj, A+Aj, A-Aj, A+Aj, -A-Aj |
| | Polarization 2 | A+Aj, -A-Aj, -A-Aj, -A+Aj, A-Aj, A+Aj, A-Aj, A+Aj, A+Aj, -A+Aj, A+Aj, -A-Aj, A+Aj, A-Aj, A-Aj, -A+Aj, - A+Aj, A-Aj, -A-Aj, -A+Aj, A+Aj, -A+Aj, A-Aj, A-Aj, A+Aj, A+Aj, A-Aj, A+Aj, -A-Aj, -A+Aj, A+Aj, A-Aj, A-Aj, A-Aj, -A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, -A-Aj, A-Aj, -A-Aj, A-Aj, -A-Aj, -A+Aj, -A-Aj, -A+Aj, A-Aj |
| 4 | Polarization 1 | A-Aj, -A+Aj, -A+Aj, -A-Aj, A+Aj, A-Aj, A+Aj, A-Aj, A-Aj, -A-Aj, A-Aj, -A+Aj, A-Aj, A+Aj, A+Aj, -A-Aj, - A-Aj, A+Aj, -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, -A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj, A+Aj, -A+Aj, -A-Aj, -A+Aj, -A-Aj, A+Aj |
| | Polarization 2 | A+Aj, -A-Aj, -A-Aj, -A+Aj, A-Aj, A+Aj, A-Aj, A+Aj, A+Aj, -A+Aj, A+Aj, -A-Aj, A+Aj, A-Aj, A-Aj, -A+Aj, - A+Aj, A-Aj, -A-Aj, -A+Aj, A+Aj, -A+Aj, A-Aj, A-Aj, A+Aj, A+Aj, A-Aj, A+Aj, -A-Aj, -A+Aj, A+Aj, A-Aj, A-Aj, A-Aj, -A+Aj, A-Aj, A-Aj, -A-Aj, A+Aj, A-Aj, -A+Aj, -A+Aj, -A+Aj, -A-Aj, A-Aj, -A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, -A-Aj, A-Aj, -A-Aj, A-Aj, -A-Aj, -A+Aj, -A-Aj, -A+Aj, A-Aj |
| 5 | Polarization 1 | -A-Aj, A+Aj, -A+Aj, A+Aj, -A+Aj, -A-Aj, -A+Aj, -A-Aj, -A+Aj, A-Aj, A-Aj, A+Aj, -A-Aj, A+Aj, A-Aj, - A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, -A-Aj, A-Aj, A+Aj, -A+Aj, A-Aj, -A-Aj, A-Aj, A-Aj, -A-Aj, -A-Aj, A+Aj, A-Aj, A+Aj, -A+Aj, -A-Aj, A+Aj, A+Aj, -A-Aj, - A-Aj, A-Aj, -A+Aj, A-Aj, A+Aj, A-Aj, A-Aj, -A-Aj, A-Aj, -A-Aj, A+Aj, -A+Aj, -A+Aj, A-Aj |
| | Polarization 2 | -A+Aj, A-Aj, -A-Aj, A-Aj, -A-Aj, -A+Aj, -A-Aj, -A+Aj, -A-Aj, A+Aj, A+Aj, A-Aj, -A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, -A-Aj, A-Aj, A-Aj, - A-Aj, A-Aj, A-Aj, A-Aj, -A+Aj, A+Aj, -A-Aj, -A+Aj, -A+Aj, A-Aj, -A+Aj, -A+Aj, -A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj, -A+Aj, A-Aj, -A-Aj, -A-Aj, A+Aj |
| 6 | Polarization 1 | -A-Aj, A+Aj, -A+Aj, A+Aj, -A+Aj, -A-Aj, -A+Aj, -A-Aj, -A+Aj, A-Aj, A-Aj, A+Aj, -A-Aj, A+Aj, A-Aj, - A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, -A-Aj, A-Aj, A+Aj, -A+Aj, A-Aj, -A-Aj, A-Aj, A-Aj, -A-Aj, -A-Aj, A+Aj, A-Aj, A+Aj, -A+Aj, -A-Aj, A+Aj, A+Aj, -A-Aj, - A-Aj, A-Aj, -A+Aj, A-Aj, A+Aj, A-Aj, A-Aj, -A-Aj, A-Aj, -A-Aj, A+Aj, -A+Aj, -A+Aj, A-Aj |
| | Polarization 2 | A-Aj, -A+Aj, A+Aj, -A+Aj, A+Aj, A-Aj, A+Aj, A-Aj, A+Aj, -A-Aj, -A-Aj, -A+Aj, A-Aj, -A+Aj, -A-Aj, A+Aj, -A-Aj, A+Aj, A+Aj, -A+Aj, -A-Aj, -A-Aj. -A-Aj, A+Aj, A+Aj, A+Aj, A+Aj, -A+Aj, A-Aj, A+Aj, -A+Aj, - A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, -A+Aj, -A+Aj, A-Aj, A-Aj, - A-Aj, A+Aj, -A-Aj, -A+Aj, -A-Aj, -A-Aj, A-Aj, -A-Aj, A-Aj, -A+Aj, A+Aj, A+Aj, -A-Aj |

(continued)

| Index | Polarization | Pilot sequence |
|---|---|---|
| 7 | Polarization 1 | -A+Aj, A-Aj, -A-Aj, A-Aj, -A-Aj, -A+Aj, -A-Aj, -A+Aj, -A-Aj, A+Aj, A+Aj, A-Aj, -A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, -A-Aj, A-Aj, A-Aj, - A-Aj, A-Aj, A-Aj, A-Aj, -A+Aj, A+Aj, -A-Aj, -A+Aj, -A+Aj, A-Aj, -A+Aj, -A+Aj, -A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj, -A+Aj, A-Aj, -A-Aj, -A-Aj, A+Aj |
| | Polarization 2 | A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, -A+Aj, A-Aj, - A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, - A+Aj, A+Aj, -A+Aj, -A+Aj, A+Aj, A+Aj. -A-Aj, -A+Aj, -A-Aj, A-Aj, A+Aj, -A-Aj, -A-Aj, A+Aj, A+Aj, - A+Aj, A-Aj, -A+Aj, -A-Aj, -A+Aj, -A+Aj, A+Aj, -A+Aj, A+Aj, -A-Aj, A-Aj, A-Aj, -A+Aj |
| 8 | Polarization 1 | A-Aj, -A+Aj, A+Aj, -A+Aj, A+Aj, A-Aj, A+Aj, A-Aj, A+Aj, -A-Aj, -A-Aj, -A+Aj, A-Aj, -A+Aj, -A-Aj, A+Aj, -A-Aj, A+Aj, A+Aj, -A+Aj, -A-Aj, -A-Aj. -A-Aj, A+Aj, A+Aj, A+Aj, A+Aj, -A+Aj, A-Aj, A+Aj, -A+Aj, - A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, -A+Aj, -A+Aj, A-Aj, A-Aj, - A-Aj, A+Aj, -A-Aj, -A+Aj, -A-Aj, -A-Aj, A-Aj, -A-Aj, A-Aj, -A+Aj, A+Aj, A+Aj, -A-Aj |
| | Polarization 2 | A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, -A+Aj, A-Aj, - A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, - A+Aj, A+Aj, -A+Aj, -A+Aj, A+Aj, A+Aj. -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj, A+Aj, -A+Aj, A+Aj, -A-Aj, A-Aj, A-Aj, -A+Aj |
| 9 | Polarization 1 | -A-Aj, -A+Aj, A-Aj, -A-Aj, -A-Aj, A-Aj, -A-Aj, A+Aj, -A-Aj, -A+Aj, -A-Aj, A-Aj, A-Aj, -A-Aj, A+Aj, -A+Aj, -A-Aj, A-Aj, -A+Aj, -A-Aj, A+Aj, -A-Aj, -A-Aj, A+Aj, A+Aj, -A-Aj, -A+Aj, -A+Aj, -A+Aj, A+Aj, A-Aj, A-Aj, A+Aj, -A-Aj, -A+Aj, -A+Aj, A+Aj, -A-Aj, A+Aj, -A+Aj, A-Aj, A+Aj, A+Aj, A-Aj, -A+Aj, A-Aj, -A+Aj, A-Aj, A-Aj, -A-Aj, -A+Aj, -A-Aj, A-Aj, -A-Aj, A+Aj, A-Aj, A-Aj, -A+Aj, -A+Aj, A+Aj, A+Aj, -A+Aj, A-Aj, A-Aj, -A-Aj, A+Aj, A+Aj, A+Aj, A+Aj, A-Aj, -A+Aj, -A-Aj, A-Aj, A+Aj, -A+Aj, -A+Aj |
| | Polarization 2 | A-Aj, A+Aj, A+Aj, A+Aj, -A-Aj, -A-Aj, A-Aj, -A-Aj, -A+Aj, A+Aj, -A-Aj, A+Aj, A+Aj, -A+Aj, A-Aj, -A-Aj, A+Aj, A-Aj, -A-Aj, A-Aj, -A-Aj, -A-Aj, A-Aj, A-Aj, -A-Aj, -A+Aj, A-Aj, -A+Aj, -A+Aj, -A-Aj, A+Aj, -A+Aj, A+Aj, A-Aj, -A+Aj, -A+Aj, A+Aj, -A+Aj, A-Aj, A+Aj, -A+Aj, -A+Aj, -A-Aj, -A+Aj, -A-Aj, -A+Aj, -A-Aj, A+Aj, A+Aj, A-Aj, -A-Aj, A+Aj, A+Aj, -A+Aj, -A-Aj, A+Aj, A-Aj, -A+Aj, -A+Aj, -A+Aj, A-Aj, A+Aj, -A-Aj, -A-Aj, A-Aj, A-Aj, A-Aj, A-Aj, A+Aj, A-Aj, -A-Aj, A+Aj, -A+Aj, A-Aj, -A+Aj, -A-Aj |
| 10 | Polarization 1 | -A-Aj, -A+Aj, A-Aj, -A-Aj, -A-Aj, A-Aj, -A-Aj, A+Aj, -A-Aj, -A+Aj, -A-Aj, A-Aj, A-Aj, -A-Aj, A+Aj, -A+Aj, -A-Aj, A-Aj, -A+Aj, -A-Aj, A+Aj, -A-Aj, -A-Aj, A+Aj, A+Aj, -A-Aj, -A+Aj, -A+Aj, -A+Aj, A+Aj, A-Aj, -A-Aj, A+Aj, -A-Aj, -A+Aj, -A+Aj, A+Aj, -A-Aj, A+Aj, -A+Aj, A-Aj, A+Aj, A+Aj, A-Aj, -A+Aj, A-Aj, -A+Aj, A-Aj, A-Aj, -A-Aj, -A+Aj, -A-Aj, A-Aj, -A-Aj, -A+Aj, A-Aj, -A-Aj, -A+Aj, -A+Aj, A+Aj, A+Aj, A+Aj, A+Aj, A-Aj, -A+Aj, -A-Aj, A-Aj, A+Aj, -A+Aj, -A+Aj |
| | Polarization 2 | A+Aj, -A-Aj, -A-Aj, A-Aj, -A-Aj, -A+Aj, A+Aj, -A-Aj, A+Aj, A+Aj, -A+Aj, A-Aj, -A-Aj, A+Aj, A-Aj, -A-Aj, A-Aj, -A-Aj, -A-Aj, A-Aj, A-Aj, -A-Aj, -A+Aj, A-Aj, -A+Aj, -A+Aj, -A-Aj, A+Aj, -A+Aj, A+Aj, A-Aj, -A+Aj, -A+Aj, A+Aj, -A+Aj, A-Aj, A+Aj, -A+Aj, -A+Aj, -A-Aj, -A+Aj, -A-Aj, -A+Aj, -A-Aj, A+Aj, A+Aj, A-Aj, -A-Aj, A+Aj, A+Aj, -A+Aj, -A-Aj, A+Aj, A-Aj, -A+Aj, -A+Aj, -A+Aj, A-Aj, A+Aj, -A-Aj, -A-Aj, A-Aj, A-Aj, A-Aj, A-Aj, A+Aj, A-Aj, -A-Aj, A+Aj, -A+Aj, A-Aj, -A+Aj, -A-Aj, A+Aj, A-Aj, A+Aj |

(continued)

| Index | Polarization | Pilot sequence |
|---|---|---|
| 11 | Polarization 1 | -A-Aj, -A+Aj, A-Aj, -A-Aj, -A-Aj, A-Aj, -A-Aj, A+Aj, -A-Aj, -A+Aj, -A-Aj, A-Aj, A-Aj, -A-Aj, A+Aj, -A+Aj, -A-Aj, A-Aj, -A+Aj, -A-Aj, A+Aj, -A-Aj, -A-Aj, A+Aj, A+Aj, -A-Aj, -A+Aj, -A+Aj, -A+Aj, A+Aj, A-Aj, A-Aj, A+Aj, -A-Aj, -A+Aj, -A+Aj, A+Aj, -A-Aj, A+Aj, -A+Aj, A-Aj, A+Aj, A+Aj, A-Aj, -A+Aj, A-Aj, -A+Aj, A-Aj, A-Aj, -A-Aj, -A+Aj, -A-Aj, A-Aj, -A-Aj, A+Aj, A-Aj, A-Aj, -A+Aj, -A+Aj, A+Aj, A+Aj, -A+Aj, A-Aj, A-Aj, -A-Aj, A+Aj, A+Aj, A+Aj, A+Aj, A-Aj, -A+Aj, -A-Aj, A-Aj, A+Aj, -A+Aj, -A+Aj |
| | Polarization 2 | A+Aj, A+Aj, -A-Aj, -A-Aj, A-Aj, -A-Aj, -A+Aj, A+Aj, -A-Aj, A+Aj, A+Aj, -A+Aj, A-Aj, -A-Aj, A+Aj, A-Aj, - A-Aj, A-Aj, -A-Aj, -A-Aj, A-Aj, A-Aj, -A-Aj, -A+Aj, A-Aj, -A+Aj, -A+Aj, -A-Aj, A+Aj, -A+Aj, A+Aj, A-Aj, - A+Aj, -A+Aj, A+Aj, -A+Aj, A-Aj, A+Aj, -A+Aj, -A+Aj, -A-Aj, -A+Aj, -A-Aj, -A+Aj, -A-Aj, A+Aj, A+Aj, A-Aj, -A-Aj, A+Aj, A+Aj, -A+Aj, -A-Aj, A+Aj, A-Aj, -A+Aj, -A+Aj, -A+Aj, A-Aj, A+Aj, -A-Aj, -A-Aj, A-Aj, A-Aj, A-Aj, A-Aj, A+Aj, A-Aj, -A-Aj, A+Aj, -A+Aj, A-Aj, -A+Aj, -A-Aj, A+Aj, A-Aj |
| 12 | Polarization 1 | -A-Aj, A-Aj, -A+Aj, A-Aj, A+Aj, -A-Aj, -A+Aj, A+Aj, -A+Aj, -A+Aj, -A+Aj, -A+Aj, -A-Aj, -A-Aj, A+Aj, - A+Aj, A-Aj, A-Aj, A-Aj, -A+Aj, A+Aj, -A-Aj, A-Aj, A+Aj, A+Aj, -A-Aj, -A+Aj, A+Aj, A+Aj, -A-Aj, A-Aj, - A-Aj, A-Aj, -A-Aj, A-Aj, A-Aj, A+Aj, -A+Aj, A-Aj, A+Aj, A-Aj, A-Aj, -A+Aj, A+Aj, A-Aj, A+Aj, -A-Aj, A-Aj, A-Aj, -A+Aj, A-Aj, -A-Aj, -A+Aj, -A+Aj, -A-Aj, -A-Aj, -A+Aj, -A-Aj, -A+Aj, A+Aj, -A-Aj, -A+Aj, A-Aj, A+Aj, A+Aj, -A-Aj, A+Aj, A-Aj, -A-Aj, -A+Aj, -A-Aj, -A-Aj, A+Aj, A+Aj, A+Aj, -A+Aj |
| | Polarization 2 | A-Aj, A-Aj, A+Aj, -A+Aj, -A-Aj, A-Aj, -A+Aj, A+Aj, A+Aj, A+Aj, A+Aj, -A-Aj, -A+Aj, -A+Aj, A-Aj, A+Aj, A+Aj, A-Aj, A-Aj, -A+Aj, -A+Aj, A+Aj, -A-Aj, -A+Aj, -A-Aj, A-Aj, -A-Aj, -A+Aj, -A+Aj, A-Aj, -A+Aj, A-Aj, -A+Aj, A+Aj, A+Aj, -A+Aj, A-Aj, A+Aj, -A-Aj, A+Aj, A-Aj, A-Aj, -A-Aj, A+Aj, -A+Aj, -A+Aj, A+Aj, A-Aj, A-Aj, A-Aj, -A-Aj, A+Aj, A+Aj, -A-Aj, -A-Aj, A+Aj, -A-Aj, A-Aj, A+Aj, -A-Aj, -A+Aj, -A+Aj, -A-Aj, A-Aj, -A-Aj, A+Aj, -A-Aj, -A+Aj, -A-Aj, -A-Aj, -A+Aj, A-Aj, -A-Aj |
| 13 | Polarization 1 | -A+Aj, A+Aj, -A-Aj, A-Aj, -A+Aj, A-Aj, A+Aj, -A-Aj, -A+Aj, A+Aj, -A+Aj, -A+Aj, -A+Aj, -A+Aj, -A-Aj, - A-Aj, A+Aj, -A+Aj, A-Aj, A-Aj, A-Aj, -A+Aj, A+Aj, -A-Aj, A-Aj, A+Aj, A+Aj, -A-Aj, -A+Aj, A+Aj, A+Aj, - A-Aj, A-Aj, -A-Aj, A-Aj, -A-Aj, A-Aj, A-Aj, A+Aj, -A+Aj, A-Aj, A+Aj, A-Aj, A-Aj, -A+Aj, A-Aj, -A-Aj, -A+Aj, -A+Aj, -A-Aj, -A-Aj, -A+Aj, -A-Aj, -A+Aj, A+Aj, -A-Aj, -A+Aj, A-Aj, A+Aj, A+Aj, -A-Aj, A+Aj, A-Aj, -A-Aj, -A+Aj, -A-Aj, -A-Aj, A+Aj, A+Aj |
| | Polarization 2 | A-Aj, A-Aj, A+Aj, -A+Aj, -A-Aj, A-Aj, -A+Aj, A+Aj, A+Aj, A+Aj, A+Aj, -A-Aj, -A+Aj, -A+Aj, A-Aj, A+Aj, A+Aj, A-Aj, A-Aj, -A+Aj, -A+Aj, A+Aj, -A-Aj, -A+Aj, -A-Aj, A-Aj, -A-Aj, -A+Aj, -A+Aj, A-Aj, -A+Aj, A-Aj, -A+Aj, A+Aj, A+Aj, -A+Aj, A-Aj, A+Aj, -A-Aj, A+Aj, A-Aj, A-Aj, -A-Aj, A+Aj, -A+Aj, -A+Aj, A+Aj, A-Aj, A-Aj, A-Aj, -A-Aj, A+Aj, A+Aj, -A-Aj, -A-Aj, A+Aj, -A-Aj, A-Aj, A+Aj, -A-Aj, - A+Aj, -A+Aj, -A-Aj, A-Aj, -A-Aj, A+Aj, -A-Aj, -A+Aj, -A-Aj, -A-Aj, -A+Aj, A-Aj, -A-Aj |
| 14 | Polarization 1 | A-Aj, A-Aj, A+Aj, -A+Aj, -A-Aj, A-Aj, -A+Aj, A+Aj, A+Aj, A+Aj, A+Aj, -A-Aj, -A+Aj, -A+Aj, A-Aj, A+Aj, A+Aj, A-Aj, A-Aj, -A+Aj, -A+Aj, A+Aj, -A-Aj, -A+Aj, -A-Aj, A-Aj, -A-Aj, -A+Aj, -A+Aj, A-Aj, -A+Aj, A-Aj, -A+Aj, A+Aj, A+Aj, -A+Aj, A-Aj, A+Aj, -A-Aj, A+Aj, A-Aj, A-Aj, -A-Aj, A+Aj, -A+Aj, -A+Aj, A+Aj, A-Aj, A-Aj, A-Aj, -A-Aj, A+Aj, A+Aj, -A-Aj, -A-Aj, A+Aj, -A-Aj, A-Aj, A+Aj, -A-Aj, - A+Aj, -A+Aj, -A-Aj, A-Aj, -A-Aj, A+Aj, -A-Aj, -A+Aj, -A-Aj, -A-Aj, -A+Aj, A-Aj, -A-Aj |
| | Polarization 2 | A+Aj, -A+Aj, A+Aj, -A-Aj, A-Aj, -A+Aj, A-Aj, A+Aj, -A-Aj, -A+Aj, A+Aj, -A+Aj, -A+Aj, -A+Aj, -A+Aj, -A-Aj, -A-Aj, A+Aj, -A+Aj, A-Aj, A-Aj, A-Aj, -A+Aj, A+Aj, -A-Aj, A-Aj, A+Aj, A+Aj, -A- Aj, -A+Aj, A+Aj, A+Aj, -A-Aj, A-Aj, -A-Aj, A-Aj, -A-Aj, A-Aj, A-Aj, A+Aj, -A+Aj, A-Aj, A+Aj, A- Aj, A-Aj, -A+Aj, A+Aj, A-Aj, A+Aj, -A-Aj, A-Aj, A-Aj, -A+Aj, A-Aj, -A-Aj, -A+Aj, -A+Aj, -A-Aj, -A-Aj, -A+Aj, -A-Aj, -A+Aj, A+Aj, - A-Aj, -A+Aj, A-Aj, A+Aj, A+Aj, -A-Aj, A+Aj, A-Aj, -A-Aj, -A+Aj, -A-Aj, -A-Aj, A+Aj |

**Table 13-2**

| Index | Polarization | Pilot sequence |
|---|---|---|
| 1 | Polarization 1 | -A-Aj, A+Aj, -A-Aj, A+Aj, A-Aj, A+Aj, A+Aj, -A+Aj, A-Aj, A+Aj, A-Aj, A+Aj, -A+Aj, -A-Aj, A+Aj, A+Aj, -A+Aj, -A-Aj, A-Aj, A+Aj, A+Aj, A-Aj, A+Aj, -A-Aj, -A-Aj, -A+Aj, -A+Aj, -A-Aj, A+Aj, -A+Aj, - A-Aj, -A+Aj, A-Aj, -A-Aj, -A-Aj, -A+Aj, -A-Aj, -A-Aj, -A+Aj, A+Aj, -A+Aj, A-Aj, -A+Aj, A+Aj, A-Aj, - A+Aj, A+Aj, -A-Aj, -A-Aj, A-Aj, -A-Aj. A+Aj, -A+Aj, A+Aj, -A-Aj, -A+Aj, A-Aj, A-Aj, -A+Aj, -A-Aj, -A-Aj, A+Aj, A-Aj, -A-Aj, A-Aj, A-Aj, -A-Aj, -A+Aj, A-Aj, A+Aj, -A+Aj, A-Aj, A-Aj, A-Aj, -A+Aj, A+Aj |
| | Polarization 2 | -A+Aj, A-Aj, -A+Aj, A-Aj, A+Aj, A-Aj, A-Aj, -A-Aj, A+Aj, A-Aj, A+Aj, A-Aj, -A-Aj, -A+Aj, A-Aj, A-Aj, - A-Aj, -A+Aj, A+Aj, A-Aj, A-Aj, A+Aj, A-Aj, -A+Aj, -A+Aj, -A-Aj, -A-Aj, -A+Aj, A-Aj, -A-Aj, -A+Aj, -A-Aj, A+Aj, -A+Aj, -A+Aj, -A-Aj, -A+Aj, -A+Aj, -A-Aj, A-Aj, -A-Aj, A+Aj, -A-Aj, A-Aj, A+Aj, -A-Aj, A-Aj, -A+Aj, -A+Aj, A+Aj, -A+Aj, A-Aj, -A-Aj, A-Aj, -A+Aj, -A-Aj, A+Aj, A+Aj, -A-Aj, -A+Aj, -A+Aj, A-Aj, A+Aj, -A+Aj, A+Aj, A+Aj, -A+Aj, -A-Aj, A+Aj, A-Aj, -A-Aj, A+Aj, A+Aj, A+Aj, -A-Aj, A-Aj |
| 2 | Polarization 1 | -A-Aj, A+Aj, -A-Aj, A+Aj, A-Aj, A+Aj, A+Aj, -A+Aj, A-Aj, A+Aj, A-Aj, A+Aj, -A+Aj, -A-Aj, A+Aj, A+Aj, -A+Aj, -A-Aj, A-Aj, A+Aj, A+Aj, A-Aj, A+Aj, -A-Aj, -A-Aj, -A+Aj, -A+Aj, -A-Aj, A+Aj, -A+Aj, - A-Aj, -A+Aj, A-Aj, -A-Aj, -A-Aj, -A+Aj, -A-Aj, -A-Aj, -A+Aj, A+Aj, -A+Aj, A-Aj, -A+Aj, A+Aj, A-Aj, - A+Aj, A+Aj, -A-Aj, -A-Aj, A-Aj, -A-Aj. A+Aj, -A+Aj, A+Aj, -A-Aj, -A+Aj, A-Aj, A-Aj, -A+Aj, -A-Aj, -A-Aj, A+Aj, A-Aj, -A-Aj, A-Aj, A-Aj, -A-Aj, -A+Aj, A-Aj, A+Aj, -A+Aj, A-Aj, A-Aj, A-Aj, -A+Aj, A+Aj |
| | Polarization 2 | A-Aj, -A+Aj, A-Aj, -A+Aj, -A-Aj, -A+Aj, -A+Aj, A+Aj, -A-Aj, -A+Aj, -A-Aj, -A+Aj, A+Aj, A-Aj, -A+Aj, - A+Aj, A+Aj, A-Aj, -A-Aj, -A+Aj, -A+Aj, -A-Aj, -A+Aj, A-Aj, A-Aj, A+Aj, A+Aj, A-Aj, -A+Aj, A+Aj, A-Aj, A+Aj, -A-Aj, A-Aj, A-Aj, A+Aj, A-Aj, A-Aj, A+Aj, -A+Aj, A+Aj, -A-Aj, A+Aj, -A+Aj, -A-Aj, A+Aj, - A+Aj, A-Aj, A-Aj, -A-Aj, A-Aj, -A+Aj, A+Aj, -A+Aj, A-Aj, A+Aj, -A-Aj, -A-Aj, A+Aj, A-Aj, A-Aj, -A+Aj, -A-Aj, A-Aj, -A-Aj, -A-Aj, A-Aj, A+Aj, -A-Aj, -A+Aj, A+Aj, -A-Aj, -A-Aj, -A-Aj, A+Aj, -A+Aj |
| 3 | Polarization 1 | A+Aj, -A-Aj, A+Aj, -A-Aj, -A+Aj, -A-Aj, -A-Aj, A-Aj, -A+Aj, -A-Aj, -A+Aj, -A-Aj, A-Aj, A+Aj, -A-Aj, - A-Aj, A-Aj, A+Aj, -A+Aj, -A-Aj, -A-Aj. -A+Aj, -A-Aj, A+Aj, A+Aj, A-Aj, A-Aj, A+Aj, -A-Aj, A-Aj, A+Aj, A-Aj, -A+Aj, A+Aj, A+Aj, A-Aj, A+Aj, A+Aj, A-Aj, -A-Aj, A-Aj, -A+Aj, A-Aj, -A-Aj, -A+Aj, A-Aj, -A-Aj, A+Aj, A+Aj, -A+Aj, A+Aj, -A-Aj, A-Aj, -A-Aj, A+Aj, A-Aj, -A+Aj, -A+Aj, A-Aj, A+Aj, A+Aj, -A-Aj, - A+Aj, A+Aj, -A+Aj, -A+Aj, A+Aj, A-Aj, -A+Aj, -A-Aj, A-Aj, -A+Aj, -A+Aj, -A+Aj, A-Aj, -A-Aj |
| | Polarization 2 | -A+Aj, A-Aj, -A+Aj, A-Aj, A+Aj, A-Aj, A-Aj, -A-Aj, A+Aj, A-Aj, A+Aj, A-Aj, -A-Aj, -A+Aj, A-Aj, A-Aj, - A-Aj, -A+Aj, A+Aj, A-Aj, A-Aj, A+Aj, A-Aj, -A+Aj, -A+Aj, -A-Aj, -A-Aj, -A+Aj, A-Aj, -A-Aj, A-Aj, -A+Aj, -A-Aj, A+Aj, -A+Aj, -A+Aj, -A-Aj, -A+Aj, -A+Aj, -A-Aj, A-Aj, -A-Aj, A+Aj, -A-Aj, A-Aj, A+Aj, -A-Aj, A-Aj, -A+Aj, -A+Aj, A+Aj, -A+Aj, A-Aj, -A-Aj, A-Aj, -A+Aj, -A-Aj, A+Aj, A+Aj, -A-Aj, -A+Aj, -A+Aj, A-Aj, A+Aj, -A+Aj, A+Aj, A+Aj, -A+Aj, -A-Aj, A+Aj, A-Aj, -A-Aj, A+Aj, A+Aj, A+Aj, -A-Aj, A-Aj |
| 4 | Polarization 1 | A+Aj, -A-Aj, A+Aj, -A-Aj, -A+Aj, -A-Aj, -A-Aj, A-Aj, -A+Aj, -A-Aj, -A+Aj, -A-Aj, A-Aj, A+Aj, -A-Aj, - A-Aj, A-Aj, A+Aj, -A+Aj, -A-Aj, -A-Aj. -A+Aj, -A-Aj, A+Aj, A+Aj, A-Aj, A-Aj, A+Aj, -A-Aj, A-Aj, A+Aj, A-Aj, -A+Aj, A+Aj, A+Aj, A-Aj, A+Aj, A+Aj, A-Aj, -A-Aj, A-Aj, -A+Aj, A-Aj, -A-Aj, -A+Aj, A-Aj, -A-Aj, -A+Aj, A-Aj, -A-Aj, A+Aj, A+Aj, -A+Aj, A+Aj, -A-Aj, A-Aj, -A-Aj, A+Aj, A-Aj, -A+Aj, -A+Aj, A-Aj, A+Aj, A+Aj, -A-Aj, - A+Aj, A+Aj, -A+Aj, -A+Aj, A+Aj, A-Aj, -A+Aj, -A-Aj, A-Aj, -A+Aj, -A+Aj, -A+Aj, A-Aj, -A-Aj |
| | Polarization 2 | A-Aj, -A+Aj, A-Aj, -A+Aj, -A-Aj, -A+Aj, -A+Aj, A+Aj, -A-Aj, -A+Aj, -A-Aj, -A+Aj, A+Aj, A-Aj, -A+Aj, - A+Aj, A+Aj, A-Aj, -A-Aj, -A+Aj, -A+Aj, -A-Aj, -A+Aj, A-Aj, A-Aj, A+Aj, A+Aj, A-Aj, -A+Aj, A+Aj, A-Aj, A+Aj, -A-Aj, A-Aj, A-Aj, A+Aj, A-Aj, A-Aj, A+Aj, -A+Aj, A+Aj, -A-Aj, A+Aj, -A+Aj, -A-Aj, A+Aj, -A+Aj, -A-Aj, A+Aj, - A+Aj, A-Aj, A-Aj, -A-Aj, A-Aj, -A+Aj, A+Aj, -A+Aj, A-Aj, A+Aj, -A-Aj, -A-Aj, A+Aj, A-Aj, A-Aj, -A+Aj, -A-Aj, A-Aj, -A-Aj, -A-Aj, A-Aj, A+Aj, -A-Aj, -A+Aj, A+Aj, -A-Aj, -A-Aj, -A-Aj, A+Aj, -A+Aj |

(continued)

| Index | Polarization | Pilot sequence |
|---|---|---|
| 5 | Polarization 1 | -A-Aj, -A+Aj, A-Aj, A-Aj, A-Aj, -A+Aj. -A-Aj, A-Aj, -A+Aj, A+Aj, A-Aj, A-Aj, A+Aj, A-Aj, -A-Aj, A+Aj, A+Aj, -A+Aj, A-Aj, A-Aj, -A+Aj, A+Aj, -A-Aj, -A+Aj, -A-Aj, A+Aj, A-Aj, A+Aj, A+Aj, -A-Aj, -A+Aj, A-Aj, -A-Aj, -A+Aj, A-Aj, -A+Aj, -A-Aj, -A+Aj, A+Aj, A+Aj, -A+Aj, A+Aj, A+Aj, A-Aj, -A+Aj, A+Aj, - A+Aj, -A-Aj, A+Aj, -A+Aj, -A+Aj, A+Aj, A+Aj, -A-Aj, A-Aj, -A-Aj, -A-Aj, A-Aj, A+Aj, -A+Aj, -A-Aj, - A-Aj, A+Aj, -A+Aj, -A-Aj, A-Aj, -A-Aj. A-Aj, -A+Aj, -A-Aj, -A-Aj, A-Aj, -A-Aj, A+Aj, -A-Aj, A+Aj |
| | Polarization 2 | -A+Aj, -A-Aj, A+Aj, A+Aj, A+Aj, -A-Aj, -A+Aj, A+Aj, -A-Aj, A-Aj, A+Aj, A+Aj, A-Aj, A+Aj, -A+Aj, A-Aj, A-Aj, -A-Aj, A+Aj, A+Aj, -A-Aj, A-Aj, -A+Aj, -A-Aj, -A+Aj, A-Aj, A+Aj, A-Aj, A-Aj, -A+Aj, -A-Aj, A+Aj, -A+Aj, -A-Aj, A+Aj, -A-Aj, -A+Aj, -A-Aj, A-Aj, A-Aj, -A-Aj, A-Aj, A-Aj, A+Aj, -A-Aj, A-Aj, -A-Aj, -A+Aj, A-Aj, -A-Aj, -A-Aj, A-Aj, A-Aj, -A+Aj, A+Aj, -A+Aj, -A+Aj, A+Aj, A-Aj, -A-Aj, -A+Aj, - A+Aj, A-Aj, -A-Aj, -A+Aj, A+Aj, -A+Aj, A+Aj, -A-Aj, -A+Aj, -A+Aj, A+Aj, -A+Aj, A-Aj, -A+Aj, A-Aj |
| 6 | Polarization 1 | -A-Aj, -A+Aj, A-Aj, A-Aj, A-Aj, -A+Aj. -A-Aj, A-Aj, -A+Aj, A+Aj, A-Aj, A-Aj, A+Aj, A-Aj, -A-Aj, A+Aj, A+Aj, -A+Aj, A-Aj, A-Aj, -A+Aj, A+Aj, -A-Aj, -A+Aj, -A-Aj, A+Aj, A-Aj, A+Aj, A+Aj, -A-Aj, -A+Aj, A-Aj, -A-Aj, -A+Aj, A-Aj, -A+Aj, -A-Aj, -A+Aj, A+Aj, A+Aj, -A+Aj, A+Aj, A+Aj, A-Aj, -A+Aj, A+Aj, - A+Aj, -A-Aj, A+Aj, -A+Aj, -A+Aj, A+Aj, A+Aj, -A-Aj, A-Aj, -A-Aj, -A-Aj, A-Aj, A+Aj, -A+Aj, -A-Aj, - A-Aj, A+Aj, -A+Aj, -A-Aj, A-Aj, -A-Aj. A-Aj, -A+Aj, -A-Aj, -A-Aj, A-Aj, -A-Aj, A+Aj, -A-Aj, A+Aj |
| | Polarization 2 | A-Aj, A+Aj, -A-Aj, -A-Aj, -A-Aj, A+Aj. A-Aj, -A-Aj, A+Aj, -A+Aj, -A-Aj, -A-Aj, -A+Aj, -A-Aj, A-Aj, - A+Aj, -A+Aj, A+Aj, -A-Aj, -A-Aj, A+Aj, -A+Aj, A-Aj, A+Aj, A-Aj, -A+Aj, -A-Aj, -A+Aj, -A+Aj, A-Aj, A+Aj, -A-Aj, A-Aj, A+Aj, -A-Aj, A+Aj, A-Aj, A+Aj, -A+Aj, -A+Aj, A+Aj, -A+Aj, -A+Aj, -A-Aj, A+Aj, - A+Aj, A+Aj, A-Aj, -A+Aj, A+Aj, A+Aj, -A+Aj, -A+Aj, A-Aj, -A-Aj, A-Aj, A-Aj, -A-Aj, -A+Aj, A+Aj, A-Aj, A-Aj, -A+Aj, A+Aj, A-Aj, -A-Aj, A-Aj, -A-Aj, A+Aj, A-Aj, A-Aj, -A-Aj, A-Aj, -A+Aj, A-Aj, -A+Aj |
| 7 | Polarization 1 | A+Aj, A-Aj, -A+Aj, -A+Aj, -A+Aj, A-Aj, A+Aj, -A+Aj, A-Aj, -A-Aj, -A+Aj, -A+Aj, -A-Aj, -A+Aj, A+Aj, - A-Aj, -A-Aj, A-Aj, -A+Aj, -A+Aj, A-Aj. -A-Aj, A+Aj, A-Aj, A+Aj, -A-Aj, -A+Aj, -A-Aj, -A-Aj, A+Aj, A-Aj, -A+Aj, A+Aj, A-Aj, -A+Aj, A-Aj, A+Aj, A-Aj, -A-Aj, -A-Aj, A-Aj, -A-Aj, -A-Aj, -A+Aj, A-Aj, -A-Aj, A-Aj, A+Aj, -A-Aj, A-Aj, A-Aj, -A-Aj, -A-Aj, A+Aj, -A+Aj, A+Aj, A+Aj, -A+Aj, -A-Aj, A-Aj, A+Aj, A+Aj, -A-Aj, A-Aj, A+Aj, -A+Aj, A+Aj, -A+Aj, A-Aj, A+Aj, A+Aj, -A+Aj, A+Aj, -A-Aj, A+Aj, -A-Aj |
| | Polarization 2 | -A+Aj, -A-Aj, A+Aj, A+Aj, A+Aj, -A-Aj, -A+Aj, A+Aj, -A-Aj, A-Aj, A+Aj, A+Aj, A-Aj, A+Aj, -A+Aj, A-Aj, A-Aj, -A-Aj, A+Aj, A+Aj, -A-Aj, A-Aj, -A+Aj, -A-Aj, -A+Aj, A-Aj, A+Aj, A-Aj, A-Aj, -A+Aj, -A-Aj, A+Aj, -A+Aj, -A-Aj, A+Aj, -A-Aj, -A+Aj, -A-Aj, A-Aj, A-Aj, -A-Aj, A-Aj, A-Aj, A+Aj, -A-Aj, A-Aj, -A-Aj, -A+Aj, A-Aj, -A-Aj, -A-Aj, A-Aj, A-Aj, -A+Aj, A+Aj, -A+Aj, -A+Aj, A+Aj, A-Aj, -A-Aj, -A+Aj, - A+Aj, A-Aj, -A-Aj, -A+Aj, A+Aj, -A+Aj, A+Aj, -A-Aj, -A+Aj, -A+Aj, A+Aj, -A+Aj, A-Aj, -A+Aj, A-Aj |
| 8 | Polarization 1 | A+Aj, A-Aj, -A+Aj, -A+Aj, -A+Aj, A-Aj, A+Aj, -A+Aj, A-Aj, -A-Aj, -A+Aj, -A+Aj, -A-Aj, -A+Aj, A+Aj, - A-Aj, -A-Aj, A-Aj, -A+Aj, -A+Aj, A-Aj. -A-Aj, A+Aj, A-Aj, A+Aj, -A-Aj, -A+Aj, -A-Aj, -A-Aj, A+Aj, A-Aj, -A+Aj, A+Aj, A-Aj, -A+Aj, A-Aj, A+Aj, A-Aj, -A-Aj, -A-Aj, A-Aj, -A-Aj, -A-Aj, -A+Aj, A-Aj, -A-Aj, A-Aj, A+Aj, -A-Aj, A-Aj, A-Aj, -A-Aj, -A-Aj, A+Aj, -A+Aj, A+Aj, A+Aj, -A+Aj, -A-Aj, A-Aj, A+Aj, A+Aj, -A-Aj, A-Aj, A+Aj, -A+Aj, A+Aj, -A+Aj, A-Aj, A+Aj, A+Aj, -A+Aj, A+Aj, -A-Aj, A+Aj, -A-Aj |
| | Polarization 2 | A-Aj, A+Aj, -A-Aj, -A-Aj, -A-Aj, A+Aj. A-Aj, -A-Aj, A+Aj, -A+Aj, -A-Aj, -A-Aj, -A+Aj, -A-Aj, A-Aj, - A+Aj, -A+Aj, A+Aj, -A-Aj, -A-Aj, A+Aj, -A+Aj, A-Aj, A+Aj, A-Aj, -A+Aj, -A-Aj, -A+Aj, -A+Aj, A-Aj, A+Aj, -A-Aj, A-Aj, A+Aj, -A-Aj, A-Aj, A+Aj, -A-Aj, A+Aj, A-Aj, A+Aj, -A+Aj, -A+Aj, A+Aj, -A+Aj, -A+Aj, -A-Aj, A+Aj, - A+Aj, A+Aj, A-Aj, -A+Aj, A+Aj, A+Aj, -A+Aj, -A+Aj, A-Aj, -A-Aj, A-Aj, A-Aj, -A-Aj, -A+Aj, A+Aj, A-Aj, A-Aj, -A+Aj, A+Aj, A-Aj, -A-Aj, A-Aj, -A-Aj, A+Aj, A-Aj, A-Aj, -A-Aj, A-Aj, A-Aj, -A+Aj, A-Aj, -A+Aj |

(continued)

| Index | Polarization | Pilot sequence |
|---|---|---|
| 9 | Polarization 1 | -A-Aj, A+Aj, A+Aj, A+Aj, -A+Aj, A-Aj. -A+Aj, A-Aj, -A+Aj, -A+Aj, A-Aj, A-Aj, -A+Aj, -A+Aj, -A-Aj, - A+Aj, -A-Aj, A+Aj, A+Aj, A+Aj, A-Aj, -A-Aj, -A+Aj, -A+Aj, A+Aj, A+Aj, A+Aj, A-Aj, -A+Aj, A-Aj, - A+Aj, A-Aj, -A-Aj, A-Aj, A-Aj, A+Aj, A-Aj, -A-Aj, -A-Aj, A+Aj, -A-Aj, A-Aj, -A+Aj, -A-Aj, -A-Aj, -A-Aj, A+Aj, A+Aj, A+Aj, A+Aj, A+Aj, -A+Aj, -A-Aj, -A-Aj, A-Aj, A+Aj, -A-Aj, -A+Aj, A+Aj, A+Aj, -A+Aj, A-Aj, A-Aj, -A-Aj, -A+Aj, A-Aj, -A-Aj, -A-Aj, -A-Aj, -A+Aj, -A-Aj, A-Aj, -A+Aj, -A-Aj, A+Aj, A-Aj |
| | Polarization 2 | A-Aj, A-Aj, A+Aj, A-Aj, -A+Aj, A+Aj, A+Aj, -A+Aj, -A+Aj, -A-Aj, -A-Aj, A-Aj, -A-Aj, A-Aj, -A+Aj, -A-Aj, -A+Aj, A+Aj, A+Aj, A-Aj, -A-Aj, A-Aj, A+Aj, A+Aj, -A-Aj, -A+Aj, -A-Aj, -A-Aj, A-Aj, -A+Aj, -A+Aj, -A+Aj, -A+Aj, A-Aj, A-Aj, A+Aj, -A-Aj, -A-Aj, A+Aj, -A+Aj, -A-Aj, A-Aj, -A+Aj, A-Aj, A-Aj, A-Aj, - A+Aj, -A+Aj, A-Aj, -A-Aj, -A-Aj, -A+Aj, A-Aj, -A-Aj, A+Aj, A-Aj, -A+Aj, A+Aj, -A-Aj, A+Aj, -A+Aj, A+Aj, A-Aj, -A-Aj, -A+Aj, A-Aj, -A+Aj, A+Aj, -A-Aj, -A-Aj, A+Aj, A+Aj, -A+Aj, A-Aj, A+Aj, A+Aj |
| 10 | Polarization 1 | -A-Aj, -A+Aj, A+Aj, -A+Aj, A-Aj, -A-Aj, -A-Aj, A-Aj, A+Aj, A+Aj, A-Aj, A+Aj, -A+Aj, -A+Aj, A+Aj, A-Aj, -A-Aj, -A-Aj, -A+Aj, -A-Aj, -A-Aj, -A-Aj, A-Aj, A-Aj, -A+Aj, -A+Aj, A-Aj, -A-Aj, -A-Aj, -A-Aj, A-Aj, A+Aj, -A+Aj, A+Aj, A+Aj, A-Aj, -A+Aj, -A+Aj, -A+Aj, A-Aj, A+Aj, -A-Aj, A-Aj, A-Aj, -A-Aj, -A-Aj, -A-Aj, A+Aj, A+Aj, A+Aj, A-Aj, -A+Aj, A+Aj, -A-Aj, A-Aj, -A-Aj, -A-Aj, -A-Aj, -A+Aj, A-Aj, A+Aj, -A+Aj, -A+Aj, -A+Aj, A+Aj, -A-Aj, A+Aj, -A+Aj, A-Aj, A+Aj, A-Aj, -A+Aj, A+Aj, A+Aj, A+Aj, A-Aj |
| | Polarization 2 | A-Aj, -A-Aj, -A+Aj, A+Aj, A+Aj, -A+Aj, -A+Aj, A+Aj, -A+Aj, -A+Aj, A-Aj, A+Aj, A-Aj, A+Aj, A-Aj, A+Aj, -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, -A-Aj, A-Aj, -A+Aj, -A+Aj, A-Aj, A-Aj, -A+Aj, -A-Aj, -A+Aj, A+Aj, A+Aj, -A-Aj, -A+Aj, -A+Aj, -A-Aj, A+Aj, A+Aj, A-Aj, -A+Aj, A-Aj, -A-Aj, -A-Aj, -A+Aj, A-Aj, - A+Aj, -A-Aj, -A+Aj, A-Aj, A+Aj, A-Aj, -A-Aj, A+Aj, -A+Aj, A-Aj, -A-Aj, A+Aj, A+Aj, -A+Aj, -A+Aj |
| 11 | Polarization 1 | -A+Aj, A+Aj, -A-Aj, A-Aj, -A+Aj, -A-Aj, A-Aj, -A-Aj, -A-Aj, -A-Aj, -A+Aj, A-Aj, -A-Aj, -A+Aj, -A+Aj, A-Aj, A+Aj, A+Aj, A-Aj, -A-Aj, A+Aj, -A+Aj, -A-Aj, -A-Aj, A-Aj, A+Aj, A+Aj, A+Aj, A+Aj, A+Aj, -A-Aj, -A-Aj, -A-Aj, A-Aj, -A+Aj, -A-Aj, A+Aj, -A-Aj, -A-Aj, -A+Aj, A+Aj, -A+Aj, -A+Aj, -A-Aj, -A+Aj, A-Aj, - A+Aj, A-Aj, -A+Aj, A+Aj, A+Aj, A+Aj, A-Aj, A-Aj, -A-Aj, -A+Aj, A+Aj, A+Aj, A+Aj, -A-Aj, A-Aj, -A-Aj, A-Aj, A-Aj, -A+Aj, -A+Aj, A-Aj, A-Aj, -A+Aj, A-Aj, -A+Aj, A-Aj, A+Aj, A+Aj, A+Aj, -A-Aj |
| | Polarization 2 | A+Aj, A+Aj, -A+Aj, A-Aj, A+Aj, A+Aj, -A-Aj, -A-Aj, A+Aj, A-Aj, -A+Aj, A-Aj, -A-Aj, -A+Aj, A+Aj, A-Aj, A+Aj, -A-Aj, A+Aj, A-Aj, -A+Aj, A+Aj, -A-Aj, -A+Aj, A-Aj, -A-Aj, -A-Aj, -A+Aj, A-Aj, A-Aj, -A+Aj, -A+Aj, -A+Aj, A-Aj, -A+Aj, -A-Aj, A-Aj, A+Aj, -A-Aj, -A-Aj, A+Aj, -A+Aj, -A+Aj, A-Aj, A-Aj, A-Aj, A-Aj, -A+Aj, -A-Aj, -A-Aj, A-Aj, -A-Aj, A+Aj, A+Aj, -A+Aj, -A-Aj, -A+Aj, A+Aj, A+Aj, A-Aj, -A-Aj, A-Aj, -A+Aj, -A-Aj, -A+Aj, -A-Aj, -A-Aj, A-Aj, A-Aj, A+Aj, A+Aj, A-Aj, -A+Aj, A+Aj, -A+Aj, -A+Aj |
| 12 | Polarization 1 | -A+Aj, A+Aj, A+Aj, A+Aj, A-Aj, -A+Aj, A+Aj, -A+Aj, A-Aj, A+Aj, -A-Aj, A+Aj, A-Aj, A-Aj, A-Aj, A+Aj, -A+Aj, A-Aj, -A-Aj, -A-Aj, -A-Aj, -A+Aj, -A-Aj, A+Aj, A-Aj, -A+Aj, A+Aj, A+Aj, A+Aj, -A-Aj, -A-Aj, - A-Aj, -A+Aj, -A+Aj, -A-Aj, A+Aj, -A+Aj, A-Aj, A-Aj, A-Aj, -A+Aj, A+Aj, A+Aj, A-Aj, A+Aj, -A+Aj, -A-Aj, -A-Aj, -A+Aj, A-Aj, A-Aj, -A+Aj, -A+Aj, -A-Aj, -A-Aj, -A-Aj, A-Aj, -A-Aj, -A+Aj, A+Aj, A-Aj, A-Aj, A+Aj, -A+Aj, A+Aj, A+Aj, A+Aj, -A+Aj, -A-Aj, -A-Aj, -A+Aj, A-Aj, A+Aj, A-Aj, -A-Aj |
| | Polarization 2 | A-Aj, A-Aj, A+Aj, A+Aj, -A-Aj, -A+Aj, A-Aj, A+Aj, -A-Aj, -A+Aj, A+Aj, -A+Aj, A-Aj, -A-Aj, A-Aj, - A+Aj, A-Aj, -A-Aj, -A-Aj, -A+Aj, A-Aj. -A+Aj, A+Aj, A+Aj, -A-Aj, A-Aj, A-Aj, -A-Aj, A+Aj, A+Aj, A-Aj, -A-Aj, A-Aj, -A+Aj, -A+Aj, A-Aj, A-Aj. -A+Aj, -A-Aj, A+Aj, -A+Aj, -A-Aj, A+Aj, -A+Aj, -A+Aj, -A-Aj, - A-Aj, -A+Aj, -A+Aj, -A+Aj, -A-Aj, -A-Aj, A-Aj, A+Aj, A+Aj, -A-Aj, A-Aj, -A-Aj, -A+Aj, -A-Aj, A+Aj, - A+Aj, A+Aj, -A+Aj, A+Aj, -A+Aj, A-Aj, A-Aj, A+Aj, A-Aj, A-Aj, A+Aj, A+Aj, A-Aj, -A-Aj, -A+Aj |

(7) It is assumed that $N_{PS}$ = 50, and the pilot sequence is one item in the following Table 14.

**Table 14**

| Index | Polarization | Pilot sequence |
|---|---|---|
| 1 | Polarization 1 | -A-Aj, -A-Aj, A-Aj, -A-Aj, -A-Aj, A-Aj, -A+Aj, -A+Aj, -A+Aj, -A-Aj, A-Aj, A+Aj, A+Aj, A-Aj, - A-Aj, -A-Aj, -A+Aj, A+Aj, -A-Aj, A+Aj, -A-Aj, -A+Aj, A-Aj, A-Aj, A-Aj, -A-Aj, -A-Aj, -A-Aj, A-Aj, A+Aj, A-Aj, A+Aj, A+Aj, -A+Aj, A-Aj, -A+Aj, A+Aj, A+Aj, A+Aj, A-Aj, -A+Aj, -A+Aj, A-Aj, A-Aj, A+Aj, -A+Aj, A+Aj, -A+Aj, -A+Aj, -A+Aj |
| | Polarization 2 | A+Aj, A+Aj, A-Aj, A-Aj, A+Aj, A+Aj, -A-Aj, A+Aj, A-Aj, A-Aj, -A-Aj, -A+Aj, -A+Aj, -A+Aj, A-Aj, -A+Aj, -A+Aj, -A-Aj, -A+Aj, -A+Aj, A-Aj, -A-Aj, -A-Aj, A+Aj, -A-Aj, A-Aj, -A-Aj, A+Aj, -A-Aj, -A-Aj, A+Aj, -A+Aj, A+Aj, A+Aj, A-Aj, A+Aj, A-Aj, -A-Aj, -A+Aj, -A-Aj, -A-Aj, -A+Aj, -A-Aj, A-Aj, A-Aj, A-Aj, -A+Aj, -A+Aj, A+Aj, A+Aj |
| 2 | Polarization 1 | -A+Aj, -A-Aj, A-Aj, -A-Aj, -A+Aj. A+Aj, A-Aj, -A-Aj, A-Aj, A-Aj, -A+Aj, A+Aj, -A-Aj, -A+Aj, A+Aj, A+Aj, -A+Aj, -A+Aj, A+Aj. A-Aj, -A+Aj, A+Aj, -A+Aj, -A-Aj, -A-Aj, A-Aj, A-Aj, A+Aj, -A-Aj, A-Aj, A-Aj, -A-Aj, A-Aj, A+Aj, -A-Aj, -A-Aj, -A+Aj, A-Aj, -A+Aj, -A-Aj, -A+Aj, A-Aj, -A-Aj, -A+Aj, A-Aj, A+Aj, A+Aj, A+Aj, -A+Aj, A+Aj |
| | Polarization 2 | -A-Aj, -A+Aj, -A-Aj, -A-Aj, -A+Aj, -A-Aj, A-Aj, A-Aj, A-Aj, -A+Aj, -A+Aj, A+Aj, A+Aj, -A-Aj, - A-Aj, -A-Aj, A+Aj, A-Aj, -A+Aj, A-Aj, -A-Aj, A+Aj, -A+Aj, -A+Aj, -A-Aj, -A-Aj, -A-Aj, -A+Aj, - A+Aj, A+Aj, -A+Aj, A+Aj, A-Aj, A+Aj, -A-Aj, A+Aj, A+Aj, A+Aj, A+Aj, -A-Aj, A-Aj, A+Aj, - A+Aj, -A+Aj, A-Aj, A+Aj, A-Aj, A-Aj, A-Aj, A-Aj |
| 3 | Polarization 1 | -A+Aj, -A-Aj, A-Aj, -A-Aj, -A+Aj. A+Aj, A-Aj, -A-Aj, A-Aj, A-Aj, -A+Aj, A+Aj, -A-Aj, -A+Aj, A+Aj, A+Aj, -A+Aj, -A+Aj, A+Aj. A-Aj, -A+Aj, A+Aj, -A+Aj, -A-Aj, -A-Aj, A-Aj, A-Aj, A+Aj, - A-Aj, A-Aj, A-Aj, -A-Aj, A-Aj, A+Aj, -A-Aj, -A-Aj, -A+Aj, A-Aj, -A+Aj, -A-Aj, -A+Aj, A-Aj, -A-Aj, -A+Aj, A-Aj, A+Aj, A+Aj, A+Aj, -A+Aj, A+Aj |
| | Polarization 2 | A-Aj, -A-Aj, -A+Aj, -A-Aj, -A-Aj, -A+Aj, -A-Aj, A-Aj, A-Aj, A-Aj, -A+Aj, -A+Aj, A+Aj, A+Aj, - A-Aj, -A-Aj, -A-Aj, A+Aj, A-Aj, -A+Aj, A-Aj, -A-Aj, A+Aj, -A+Aj, -A+Aj, -A-Aj, -A-Aj, -A-Aj, - A+Aj, -A+Aj, A+Aj, -A+Aj, A+Aj. A-Aj, A+Aj, -A-Aj, A+Aj, A+Aj, A+Aj, A+Aj, -A-Aj, A-Aj, A+Aj, -A+Aj, -A+Aj, A-Aj, A+Aj, A-Aj, A-Aj, A-Aj |
| 4 | Polarization 1 | A-Aj, A-Aj, A-Aj, A+Aj, A-Aj, A+Aj, -A+Aj, -A+Aj, A-Aj, A-Aj, -A+Aj, A+Aj, A+Aj, A+Aj, A-Aj, -A+Aj, A-Aj, A+Aj, A+Aj, -A+Aj, A+Aj, -A+Aj, -A-Aj, -A-Aj, -A-Aj, -A+Aj, -A+Aj, -A+Aj, A-Aj, -A-Aj, A+Aj, -A-Aj, A+Aj, A-Aj, -A-Aj, -A-Aj, -A+Aj, A+Aj, A+Aj, -A+Aj, -A-Aj, A-Aj, A-Aj, A-Aj, -A+Aj, -A-Aj, -A-Aj, -A+Aj, -A-Aj, -A-Aj |
| | Polarization 2 | A+Aj, A+Aj, A-Aj, A-Aj, -A+Aj, -A+Aj, -A+Aj, -A-Aj, A-Aj, -A-Aj, -A-Aj, A-Aj, -A-Aj, -A+Aj, A+Aj, -A+Aj, A+Aj, A+Aj, A-Aj, A+Aj, -A-Aj, -A-Aj, A+Aj, -A-Aj, -A+Aj, -A-Aj, A+Aj, -A-Aj, - A-Aj, -A+Aj, A-Aj, A-Aj, -A-Aj, A-Aj, A-Aj, -A+Aj, A-Aj, A-Aj, A-Aj, -A-Aj, -A+Aj, -A+Aj, A+Aj, -A-Aj, A+Aj, A+Aj, -A+Aj, -A+Aj, A+Aj, A+Aj |
| 5 | Polarization 1 | A+Aj, A-Aj, A+Aj, A+Aj, A+Aj, -A+Aj, A-Aj, -A-Aj, -A+Aj, A-Aj, -A-Aj, A-Aj, -A+Aj, A-Aj, -A-Aj, -A-Aj, A+Aj, -A+Aj, -A-Aj, -A+Aj, -A+Aj, -A-Aj, A+Aj, -A+Aj, -A+Aj, -A-Aj, -A-Aj, A-Aj, A+Aj, A-Aj, -A+Aj, A+Aj, A-Aj, A-Aj, A+Aj, A+Aj, A-Aj, -A-Aj, A+Aj, A-Aj, -A+Aj, -A+Aj, -A-Aj, -A+Aj, A+Aj, A-Aj, -A-Aj, -A+Aj, -A-Aj, A-Aj |
| | Polarization 2 | -A+Aj, -A+Aj, -A+Aj, -A+Aj, A+Aj, -A+Aj, A-Aj, A-Aj, A+Aj, -A+Aj, -A-Aj, A+Aj, A+Aj, A+Aj, A+Aj, -A-Aj, A+Aj, -A+Aj, A+Aj, A-Aj, A+Aj, A-Aj, A-Aj, -A-Aj, -A-Aj, -A-Aj, A-Aj, A-Aj, A+Aj, -A-Aj, -A+Aj, A-Aj, -A+Aj. A+Aj, -A-Aj, -A-Aj, -A-Aj, A+Aj, A+Aj, A-Aj, A-Aj, -A+Aj, - A+Aj, -A+Aj, -A-Aj, A-Aj, -A-Aj, -A-Aj, A-Aj, -A-Aj |
| 6 | Polarization 1 | A+Aj, A-Aj, A+Aj, A+Aj, A+Aj, -A+Aj, A-Aj, -A-Aj, -A+Aj, A-Aj, -A-Aj, A-Aj, -A+Aj, A-Aj, -A-Aj, -A-Aj, A+Aj, -A+Aj, -A-Aj, -A+Aj, -A+Aj, -A-Aj, A+Aj, -A+Aj, -A+Aj, -A-Aj, -A-Aj, A-Aj, A+Aj, A-Aj, -A+Aj, A+Aj, A-Aj, A-Aj, A+Aj, A+Aj, A-Aj, -A-Aj, A+Aj, A-Aj, -A+Aj, -A+Aj, -A-Aj, -A+Aj, A+Aj, A-Aj, -A-Aj, -A+Aj, -A-Aj, A-Aj |
| | Polarization 2 | -A+Aj, -A+Aj, -A+Aj, A+Aj, -A+Aj, A-Aj, A-Aj, A+Aj, -A+Aj, -A-Aj, A+Aj, A+Aj, A+Aj, A+Aj, - A-Aj, A+Aj, -A+Aj, A+Aj, A-Aj, A+Aj, A-Aj, A-Aj, -A-Aj, -A-Aj, -A-Aj, A-Aj, A-Aj, A+Aj, -A-Aj, -A+Aj, A-Aj, -A+Aj, A+Aj, -A-Aj, -A-Aj, -A-Aj, A+Aj, A+Aj, A-Aj, A-Aj, -A+Aj, -A+Aj, - A+Aj, -A-Aj, A-Aj, -A-Aj, -A-Aj, A-Aj, -A-Aj, -A+Aj |

(continued)

| Index | Polarization | Pilot sequence |
|---|---|---|
| 7 | Polarization 1 | -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj |
| | Polarization 2 | -A-Aj, A-Aj, -A+Aj, -A+Aj, -A-Aj. -A-Aj, -A+Aj, -A-Aj, A+Aj, A-Aj, -A-Aj, -A+Aj, -A+Aj, - A+Aj, A-Aj, -A+Aj, -A+Aj, A+Aj, -A-Aj, -A+Aj, A-Aj, A-Aj, A-Aj, A+Aj, A-Aj, A-Aj, A+Aj, - A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj, -A+Aj, A-Aj, -A-Aj, -A-Aj, A+Aj, -A+Aj, A+Aj |
| 8 | Polarization 1 | -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj |
| | Polarization 2 | A+Aj, -A+Aj, A-Aj, A-Aj, A+Aj, A+Aj, A-Aj, A+Aj, -A-Aj, -A+Aj, A+Aj, A-Aj, A-Aj, A-Aj, - A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, - A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, - A+Aj, A-Aj, -A+Aj, A+Aj, A+Aj, -A-Aj, A-Aj, -A-Aj |
| 9 | Polarization 1 | A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, -A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj |
| | Polarization 2 | -A-Aj, A-Aj, -A+Aj, -A+Aj, -A-Aj. -A-Aj, -A+Aj, -A-Aj, A+Aj, A-Aj, -A-Aj, -A+Aj, -A+Aj, - A+Aj, A-Aj, -A+Aj, -A+Aj, A+Aj, -A-Aj, -A+Aj, A-Aj, A-Aj, A-Aj, A+Aj, A-Aj, A-Aj, A+Aj, - A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj, -A+Aj, A-Aj, -A-Aj, -A-Aj, A+Aj, -A+Aj, A+Aj |
| 10 | Polarization 1 | A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, -A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj |
| | Polarization 2 | A+Aj, -A+Aj, A-Aj, A-Aj, A+Aj, A+Aj, A-Aj, A+Aj, -A-Aj, -A+Aj, A+Aj, A-Aj, A-Aj, A-Aj, - A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, - A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, - A+Aj, A-Aj, -A+Aj, A+Aj, A+Aj, -A-Aj, A-Aj, -A-Aj |
| 11 | Polarization 1 | -A+Aj, -A-Aj, -A+Aj, A-Aj, A-Aj, A+Aj, -A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, -A-Aj, A-Aj, A+Aj, -A+Aj, A-Aj, -A-Aj, A-Aj, A-Aj, -A-Aj, -A-Aj, A+Aj, A-Aj |
| | Polarization 2 | -A-Aj, -A+Aj, -A-Aj, A+Aj, A+Aj, A-Aj, -A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, -A-Aj, A-Aj, A-Aj, -A-Aj, A-Aj, A-Aj, A-Aj, -A+Aj, A+Aj, -A-Aj, -A+Aj, -A+Aj, A-Aj, -A+Aj, -A+Aj, A+Aj, A-Aj, -A-Aj, A+Aj, -A+Aj, A+Aj, A+Aj, -A+Aj. -A+Aj, A-Aj, A+Aj |
| 12 | Polarization 1 | -A+Aj, -A-Aj, -A+Aj, A-Aj, A-Aj, A+Aj, -A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, -A-Aj, A-Aj, A+Aj, -A+Aj, A-Aj, -A-Aj, A-Aj, A-Aj, -A-Aj, -A-Aj, A+Aj, A-Aj |
| | Polarization 2 | A+Aj, A-Aj, A+Aj, -A-Aj, -A-Aj, -A+Aj, A-Aj, -A+Aj, -A-Aj, A+Aj, -A-Aj, A+Aj, A+Aj, -A+Aj, - A-Aj, -A-Aj, -A-Aj, A+Aj, A+Aj, A+Aj, A+Aj, -A+Aj, A-Aj, A+Aj, -A+Aj, -A+Aj, A+Aj, -A+Aj, - A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj |

(continued)

| Index | Polarization | Pilot sequence |
|---|---|---|
| 13 | Polarization 1 | A-Aj, A+Aj, A-Aj, -A+Aj, -A+Aj, -A-Aj, A+Aj, -A-Aj, -A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, - A+Aj, A+Aj, -A+Aj, -A+Aj, A+Aj. A+Aj, -A-Aj, -A+Aj |
| | Polarization 2 | -A-Aj, -A+Aj, -A-Aj, A+Aj, A+Aj, A-Aj, -A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, -A-Aj, A-Aj, A-Aj, -A-Aj, A-Aj, A-Aj, A-Aj, -A+Aj, A+Aj, -A-Aj, -A+Aj, -A+Aj, A-Aj, -A+Aj, -A+Aj, -A+Aj, A+Aj, A-Aj, -A-Aj, A+Aj, -A+Aj, A+Aj, A+Aj, -A+Aj. -A+Aj, A-Aj, A+Aj |
| 14 | Polarization 1 | A-Aj, A+Aj, A-Aj, -A+Aj, -A+Aj, -A-Aj, A+Aj, -A-Aj, -A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, - A+Aj, A+Aj, -A+Aj, -A+Aj, A+Aj. A+Aj, -A-Aj, -A+Aj |
| | Polarization 2 | A+Aj, A-Aj, A+Aj, -A-Aj, -A-Aj, -A+Aj, A-Aj, -A+Aj, -A-Aj, A+Aj, -A-Aj, A+Aj, A+Aj, -A+Aj, - A-Aj, -A-Aj, -A-Aj, A+Aj, A+Aj, A+Aj, A+Aj, -A+Aj, A-Aj, A+Aj, -A+Aj, -A+Aj, A+Aj, -A+Aj, - A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj |

(8) When $N_{PS}$ = 66, the pilot sequence is one item in the following Table 15-1. Alternatively, any item is selected from Table 15-2 as a pilot sequence in one polarization, and any item is selected from Table 15-3 as a pilot sequence in the other polarization. Alternatively, any item is selected from Table 15-4 as a pilot sequence in one polarization, and any item is selected from the following Table 15-5 as a pilot sequence in the other polarization.

**Table 15-1**

| Index | Polarization | Pilot sequence |
|---|---|---|
| 1 | Polarization 1 | -A+Aj, A+Aj, -A+Aj, -A-Aj, A+Aj, A+Aj, A+Aj, -A-Aj, -A+Aj, A-Aj, A-Aj, -A-Aj, A+Aj, A+Aj, -A-Aj, -A-Aj, A+Aj, A-Aj, -A+Aj, A+Aj, -A-Aj, -A+Aj, -A-Aj, -A-Aj, -A-Aj, -A+Aj, A-Aj, A-Aj, A-Aj, A-Aj, -A+Aj, -A+Aj, A+Aj, A+Aj, -A-Aj, A+Aj, -A-Aj, A-Aj, A-Aj, A-Aj, -A+Aj, A-Aj, -A+Aj, -A-Aj, A-Aj, -A+Aj, -A-Aj, -A+Aj, A-Aj, -A-Aj, A-Aj, A+Aj, -A+Aj, -A+Aj, A-Aj, - A+Aj, A+Aj, A-Aj, A+Aj, -A-Aj, A-Aj, -A+Aj, A+Aj, -A-Aj, A+Aj, -A+Aj |
| | Polarization 2 | -A-Aj, -A+Aj, A+Aj, -A+Aj, A-Aj, A-Aj, -A+Aj, A-Aj, A+Aj, -A+Aj, -A-Aj, -A-Aj, A+Aj, - A+Aj, -A-Aj, A-Aj, -A+Aj, -A+Aj, A-Aj, A+Aj, A+Aj, A+Aj, A+Aj, -A-Aj, A+Aj, A+Aj, -A-Aj, -A+Aj, -A-Aj, A+Aj, A-Aj, A-Aj, -A-Aj, -A-Aj, A-Aj, -A+Aj, -A+Aj, A+Aj, -A-Aj, A-Aj, -A-Aj, A-Aj, -A-Aj, A-Aj, -A+Aj, -A+Aj, -A-Aj, A-Aj, -A+Aj, A-Aj, -A-Aj, -A-Aj, -A+Aj, -A+Aj, A+Aj, A+Aj, A+Aj, -A+Aj, A+Aj, -A-Aj, -A-Aj, A-Aj, A-Aj, A-Aj, A+Aj, A+Aj |
| 2 | Polarization 1 | A-Aj, A+Aj, -A-Aj, A+Aj, A-Aj, -A+Aj, -A-Aj, A+Aj, -A+Aj, A+Aj, A-Aj, -A+Aj, A-Aj, A-Aj, A+Aj, -A+Aj, -A-Aj, -A+Aj, A-Aj, -A-Aj, A-Aj, -A+Aj, -A-Aj, A-Aj, -A+Aj, A-Aj, -A+Aj, - A+Aj, -A+Aj, -A-Aj, A+Aj, -A-Aj, A+Aj, A+Aj, A-Aj, A-Aj, -A+Aj, -A+Aj, -A+Aj, -A+Aj, A-Aj, -A-Aj, -A-Aj, -A-Aj, A-Aj, -A-Aj, A+Aj, A-Aj, -A+Aj, A+Aj, -A-Aj, -A-Aj, A+Aj, A+Aj, -A-Aj, -A+Aj, -A+Aj, A-Aj, -A-Aj, A+Aj, A+Aj, A+Aj, -A-Aj, A-Aj, A+Aj, A-Aj |
| | Polarization 2 | A+Aj, A+Aj, -A+Aj, -A+Aj, -A+Aj, -A-Aj, -A-Aj, A+Aj, A-Aj, A+Aj, A+Aj, A+Aj, A-Aj, A-Aj, -A-Aj, -A-Aj, -A+Aj, A-Aj, -A+Aj, -A-Aj, A-Aj, A-Aj, -A+Aj, -A-Aj, -A+Aj, -A-Aj, -A+Aj, -A-Aj, A+Aj, A-Aj, A-Aj, -A+Aj, -A-Aj, -A-Aj, -A+Aj, -A+Aj, A+Aj, -A-Aj, A-Aj, -A-Aj, A+Aj, A+Aj, -A-Aj, A+Aj, A+Aj, A+Aj, A+Aj, -A+Aj, A-Aj, A-Aj, -A+Aj, -A-Aj, A-Aj, A+Aj, -A-Aj, - A-Aj, A-Aj, A+Aj, -A+Aj, A-Aj, -A+Aj, -A+Aj, A-Aj, A+Aj, A-Aj, -A-Aj |

**Table 15-2**

| Index | Pilot sequence |
|---|---|
| 1 | -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj, A-Aj, A+Aj, A-Aj, A-Aj, -A+Aj, -A-Aj, -A-Aj, A-Aj, -A+Aj, A-Aj, A+Aj |
| 2 | -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, -A-Aj, - A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj, -A+Aj, -A-Aj, - A+Aj, -A+Aj, A-Aj, A+Aj, A+Aj, -A+Aj, A-Aj, -A+Aj |
| 3 | -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, -A-Aj, -A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, - A-Aj, -A+Aj, -A+Aj, -A+Aj, A-Aj, -A-Aj, A-Aj, A-Aj, -A+Aj, -A+Aj, -A-Aj, -A-Aj, A+Aj, -A+Aj, - A-Aj, -A+Aj, -A+Aj, A-Aj, A+Aj, A+Aj, -A+Aj, A-Aj |
| 4 | A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj, A-Aj, A+Aj, A-Aj, A-Aj, -A+Aj, -A-Aj, -A-Aj, A-Aj, -A+Aj |
| 5 | A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, - A+Aj, -A-Aj, -A-Aj, -A+Aj, -A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj, A-Aj, A+Aj, A-Aj, A-Aj, -A+Aj, -A-Aj, -A-Aj, A-Aj, -A+Aj, A-Aj |
| 6 | A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, -A-Aj, -A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj, -A+Aj, -A-Aj, -A+Aj, - A+Aj, A-Aj, A+Aj, A+Aj, -A+Aj, A-Aj, -A+Aj, -A-Aj |

**Table 15-3**

| Index | Pilot sequence |
|---|---|
| 1 | -A-Aj, -A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, -A+Aj, -A-Aj, -A+Aj, -A+Aj, -A+Aj, - A+Aj, A-Aj, A+Aj, -A-Aj, A+Aj, A+Aj, A+Aj, A-Aj, A+Aj, -A+Aj, -A+Aj, -A-Aj, -A-Aj, -A-Aj, A+Aj, -A+Aj, A+Aj, A+Aj, -A-Aj, -A-Aj, -A+Aj, -A+Aj, A-Aj, -A-Aj, -A+Aj, -A-Aj, -A-Aj, A+Aj, A-Aj, A-Aj, -A-Aj, A+Aj |
| 2 | -A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, -A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, -A+Aj, -A-Aj, -A-Aj, -A-Aj, A+Aj, -A+Aj, A+Aj, A+Aj, -A-Aj, -A-Aj, -A+Aj, -A+Aj, A-Aj, -A-Aj, -A+Aj, -A-Aj, -A-Aj, A+Aj, A-Aj, A-Aj, -A-Aj, A+Aj, -A-Aj |
| 3 | -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, - A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj, A+Aj, A-Aj, A+Aj, A+Aj, -A-Aj, -A+Aj, -A+Aj, A+Aj, -A-Aj, A+Aj, A-Aj |
| 4 | A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, -A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, -A+Aj, -A-Aj, -A-Aj, -A-Aj, A+Aj, -A+Aj, A+Aj, A+Aj, -A-Aj, -A-Aj, -A+Aj, -A+Aj, A-Aj, -A-Aj, -A+Aj, -A-Aj, -A-Aj, A+Aj, A-Aj, A-Aj, -A-Aj, A+Aj, -A-Aj, -A+Aj |
| 5 | A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, - A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, -A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, - A-Aj, A+Aj, A+Aj, A-Aj, A-Aj, -A+Aj, A+Aj, A-Aj, A+Aj, A+Aj, -A-Aj, -A+Aj, -A+Aj, A+Aj, -A-Aj, A+Aj |

(continued)

| Index | Pilot sequence |
|---|---|
| 6 | A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj, A+Aj, A-Aj, A+Aj, A+Aj, -A-Aj, -A+Aj, -A+Aj, A+Aj, -A-Aj |

**Table 15-4**

| Index | Pilot sequence |
|---|---|
| 1 | -A-Aj, A-Aj, -A+Aj, A-Aj, A+Aj, A+Aj, -A+Aj, A-Aj, A-Aj, -A-Aj, A-Aj, A+Aj, -A-Aj, -A-Aj, A-Aj, A-Aj, -A+Aj, -A+Aj, -A-Aj, -A+Aj, A-Aj, A-Aj, A-Aj, -A-Aj, -A-Aj, -A+Aj, A+Aj, -A+Aj, -A+Aj, -A+Aj, A-Aj, -A+Aj, A+Aj, -A-Aj, -A-Aj, -A-Aj, -A-Aj, A-Aj, -A-Aj, A+Aj, A-Aj, -A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj, -A+Aj, -A-Aj, A+Aj, A-Aj, A+Aj |
| 2 | -A+Aj, A-Aj, -A+Aj, -A-Aj, -A-Aj, A-Aj, -A+Aj, -A+Aj, A+Aj, -A+Aj, -A-Aj, A+Aj, A+Aj, -A+Aj, -A+Aj, A-Aj, A-Aj, A+Aj, A-Aj, -A+Aj, -A+Aj, -A+Aj, A+Aj, A+Aj, A-Aj, -A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, -A-Aj, A-Aj, A+Aj, A+Aj, -A-Aj, -A-Aj, A+Aj, -A-Aj, -A-Aj, -A+Aj, A-Aj, A+Aj, -A-Aj, -A+Aj, -A-Aj, A+Aj |
| 3 | -A+Aj, A-Aj, A+Aj, A+Aj, -A+Aj, A-Aj, A-Aj, -A-Aj, A-Aj, A+Aj, -A-Aj, -A-Aj, A-Aj, A-Aj, -A+Aj, -A+Aj, -A-Aj, -A+Aj, A-Aj, A-Aj, A-Aj, -A-Aj, -A-Aj, -A+Aj, A+Aj, -A+Aj, -A+Aj, -A+Aj, A-Aj, -A+Aj, A+Aj, -A-Aj, -A-Aj, - A-Aj, -A-Aj, A-Aj, -A-Aj, A+Aj, A-Aj, -A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj, -A+Aj, -A-Aj, A+Aj, A-Aj, A+Aj, -A-Aj, A-Aj |
| 4 | A-Aj, -A+Aj, -A-Aj, -A-Aj, A-Aj, -A+Aj, -A+Aj, A+Aj, -A+Aj, -A-Aj, A+Aj, A+Aj, -A+Aj, -A+Aj, A-Aj, A-Aj, A+Aj, A-Aj, -A+Aj, -A+Aj, -A+Aj, A+Aj, A+Aj, A-Aj, -A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, -A-Aj, A-Aj, A+Aj, A+Aj, -A-Aj, -A-Aj, A+Aj, -A-Aj, -A-Aj, -A+Aj, A-Aj, A+Aj, -A-Aj, -A+Aj, -A-Aj, A+Aj, -A+Aj |
| 5 | A-Aj, -A+Aj, A-Aj, A+Aj, A+Aj, -A+Aj, A-Aj, A-Aj, -A-Aj, A-Aj, A+Aj, -A-Aj, -A-Aj, A-Aj, A-Aj, -A+Aj, -A+Aj, -A-Aj, -A+Aj, A-Aj, A-Aj, A-Aj, -A-Aj, -A-Aj, -A+Aj, A+Aj, -A+Aj, -A+Aj, -A+Aj, A-Aj, -A+Aj, A+Aj, -A-Aj, - A-Aj, -A-Aj, -A-Aj, A-Aj, -A-Aj, A+Aj, A-Aj, -A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj, -A+Aj, -A-Aj, A+Aj, A-Aj, A+Aj, -A-Aj |
| 6 | A+Aj, -A+Aj, A-Aj, -A+Aj, -A-Aj, -A-Aj, A-Aj, -A+Aj, -A+Aj, A+Aj, -A+Aj, -A-Aj, A+Aj, A+Aj, -A+Aj, -A+Aj, A-Aj, A-Aj, A+Aj, A-Aj, -A+Aj, -A+Aj, -A+Aj, A+Aj, A+Aj, A-Aj, -A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, -A-Aj, A-Aj, A-Aj, A+Aj, A+Aj, -A-Aj, -A-Aj, A+Aj, -A-Aj, -A-Aj, -A+Aj, A-Aj, A+Aj, -A-Aj, -A+Aj, -A-Aj |

**Table 15-5**

| Index | Pilot sequence |
|---|---|
| 1 | -A-Aj, A+Aj, -A-Aj, -A+Aj, -A+Aj, A+Aj, -A-Aj, -A-Aj, A-Aj, -A-Aj, -A+Aj, A-Aj, A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, -A-Aj, -A+Aj, A+Aj, -A+Aj, A+Aj, -A+Aj, -A+Aj, A+Aj, A-Aj, A-Aj, -A+Aj, -A+Aj, A-Aj, -A+Aj, -A+Aj, -A-Aj, A+Aj, A-Aj, -A+Aj, -A-Aj, -A+Aj, A-Aj |
| 2 | -A-Aj, A+Aj, A-Aj, A-Aj, -A-Aj, A+Aj, A+Aj, -A+Aj, A+Aj, A-Aj, -A+Aj, -A+Aj, A+Aj, A+Aj, -A-Aj, -A-Aj, -A+Aj, -A-Aj, A+Aj, A+Aj, A+Aj, -A+Aj, -A+Aj, -A-Aj, A-Aj, -A-Aj, -A-Aj, -A-Aj, A+Aj, -A-Aj, A-Aj, -A+Aj, -A+Aj, - A+Aj, -A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, - A-Aj, -A+Aj, -A+Aj, A-Aj, A-Aj, -A+Aj, A-Aj, A-Aj, A+Aj, -A-Aj, -A+Aj, A-Aj, A+Aj, A-Aj, -A+Aj, A+Aj |
| 3 | -A+Aj, A+Aj, -A-Aj, A+Aj, A-Aj, A-Aj, -A-Aj, A+Aj, A+Aj, -A+Aj, A+Aj, A-Aj, -A+Aj, -A+Aj, A+Aj, A+Aj, -A-Aj, -A-Aj, -A+Aj, -A-Aj, A+Aj, A+Aj, A+Aj, -A+Aj, -A+Aj, -A-Aj, A-Aj, -A-Aj, -A-Aj, -A-Aj, A+Aj, -A-Aj, A-Aj, - A+Aj, -A+Aj, -A+Aj, -A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, -A-Aj, -A+Aj, -A+Aj, A-Aj, A-Aj, -A+Aj, A-Aj, A-Aj, A+Aj, -A-Aj, -A+Aj, A-Aj, A+Aj, A-Aj, -A+Aj, A+Aj |

(continued)

| Index | Pilot sequence |
|---|---|
| 4 | A-Aj, -A-Aj, A+Aj, -A-Aj, -A+Aj, -A+Aj, A+Aj, -A-Aj, -A-Aj, A-Aj, -A-Aj, -A+Aj, A-Aj, A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, -A-Aj, -A+Aj, A+Aj, -A+Aj, A+Aj, -A+Aj, -A+Aj, A+Aj, A-Aj, A-Aj, -A+Aj, -A+Aj, A-Aj, -A+Aj, -A+Aj, -A-Aj, A+Aj, A-Aj, -A+Aj, -A-Aj, -A+Aj |
| 5 | A+Aj, -A-Aj, -A+Aj, -A+Aj, A+Aj, -A-Aj, -A-Aj, A-Aj, -A-Aj, -A+Aj, A-Aj, A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, -A-Aj, -A+Aj, A+Aj, -A+Aj, A+Aj, -A+Aj, -A+Aj, A+Aj, A-Aj, A-Aj, -A+Aj, -A+Aj, A-Aj, -A+Aj, -A+Aj, -A-Aj, A+Aj, A-Aj, -A+Aj, -A-Aj, -A+Aj, A-Aj, -A-Aj |
| 6 | A+Aj, -A-Aj, A+Aj, A-Aj, A-Aj, -A-Aj, A+Aj, A+Aj, -A+Aj, A+Aj, A-Aj, -A+Aj, -A+Aj, A+Aj, A+Aj, -A-Aj, -A-Aj, -A+Aj, -A-Aj, A+Aj, A+Aj, A+Aj, -A+Aj, -A+Aj, -A-Aj, A-Aj, -A-Aj, -A-Aj, -A-Aj, A+Aj, -A-Aj, A-Aj, -A+Aj, -A+Aj, -A+Aj, -A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, -A-Aj, -A+Aj, -A+Aj, A-Aj, A-Aj, -A+Aj, A-Aj, A-Aj, A+Aj, -A-Aj, -A+Aj, A-Aj, A+Aj, A-Aj, -A+Aj |

(9) When $N_{PS} = 68$, if a remainder of $N_{TS}$ divided by 4 is 1, the pilot sequence is one item in Table 16-1. If a remainder of $N_{TS}$ divided by 4 is 3, the pilot sequence is one item in Table 16-1 or Table 16-2.

**Table 16-1**

| Index | Polarization | Pilot sequence |
|---|---|---|
| 1 | Polarization 1 | -A-Aj, -A-Aj, A+Aj, A+Aj, A-Aj, A-Aj, -A+Aj, A+Aj, A-Aj, A+Aj, A+Aj, -A-Aj, -A+Aj, -A+Aj, A+Aj, - A-Aj, A+Aj, A-Aj, A+Aj, -A-Aj, -A+Aj, A-Aj, A-Aj, A+Aj, -A-Aj, A-Aj, A+Aj, -A+Aj, -A-Aj, -A-Aj, A-Aj, A-Aj, -A-Aj, A-Aj, -A-Aj, A+Aj, A-Aj, -A-Aj, -A+Aj, A-Aj, -A+Aj, A-Aj, A+Aj, -A+Aj, A+Aj, - A+Aj, -A+Aj, -A+Aj, -A-Aj, A-Aj, -A+Aj, A-Aj, -A-Aj, -A-Aj, -A-Aj, A-Aj, -A+Aj, -A+Aj, -A+Aj, A+Aj, A+Aj, A-Aj, -A+Aj, -A-Aj, -A-Aj, -A+Aj, A+Aj, A+Aj |
| | Polarization 2 | -A+Aj, -A+Aj, A-Aj, A-Aj, A+Aj, A+Aj, -A-Aj, A-Aj, A+Aj, A-Aj, A-Aj, -A+Aj, -A-Aj, -A-Aj, A-Aj, - A+Aj, A-Aj, A+Aj, A-Aj, -A+Aj, -A-Aj, A+Aj, A+Aj, A-Aj, -A+Aj, A+Aj, A-Aj, -A-Aj, -A+Aj, -A+Aj, A+Aj, A+Aj, -A+Aj, A+Aj, -A+Aj, A-Aj, A+Aj, -A+Aj, -A-Aj, A+Aj, -A-Aj, A+Aj, A-Aj, -A-Aj, -A-Aj, - A-Aj, -A-Aj, -A+Aj, A+Aj, -A-Aj, A+Aj, -A+Aj, -A+Aj, -A+Aj, A+Aj, -A-Aj, -A-Aj, -A-Aj, A-Aj, A-Aj, A+Aj, -A-Aj, -A+Aj, -A+Aj, -A-Aj, A-Aj, A-Aj |
| 2 | Polarization 1 | -A-Aj, -A-Aj, A+Aj, A+Aj, A-Aj, A-Aj, -A+Aj, A+Aj, A-Aj, A+Aj, A+Aj, -A-Aj, -A+Aj, -A+Aj, A+Aj, - A-Aj, A+Aj, A-Aj, A+Aj, -A-Aj, -A+Aj, A-Aj, A-Aj, A+Aj, -A-Aj, A-Aj, A+Aj, -A+Aj, -A-Aj, -A-Aj, A-Aj, A-Aj, -A-Aj, A-Aj, -A-Aj, A+Aj, A-Aj, -A-Aj, -A+Aj, A-Aj, -A+Aj, A-Aj, A+Aj, -A+Aj, A+Aj, - A+Aj, -A+Aj, -A+Aj, -A-Aj, A-Aj, -A+Aj, A-Aj, -A-Aj, -A-Aj, -A-Aj, A-Aj, -A+Aj, -A+Aj, -A+Aj, A+Aj, A+Aj, A-Aj, -A+Aj, -A-Aj, -A-Aj, -A+Aj, A+Aj, A+Aj |
| | Polarization 2 | A-Aj, A-Aj, -A+Aj, -A+Aj, -A-Aj, -A-Aj, A+Aj, -A+Aj, -A-Aj, -A+Aj, -A+Aj, A-Aj, A+Aj, A+Aj, - A+Aj, A-Aj, -A+Aj, -A-Aj, -A+Aj, A-Aj, A+Aj, -A-Aj, -A-Aj, -A+Aj, A-Aj, -A-Aj, -A+Aj, A+Aj, A- Aj, A-Aj, -A-Aj, -A-Aj, A-Aj, -A-Aj, A-Aj, -A+Aj, -A-Aj, A-Aj, A+Aj, -A-Aj, A+Aj, -A-Aj, -A+Aj, A+Aj, - A+Aj, A+Aj, A+Aj, A+Aj, A-Aj, -A-Aj, A+Aj, -A-Aj, A-Aj, A-Aj, A-Aj, -A-Aj, A+Aj, A+Aj, A+Aj, - A+Aj, -A+Aj, -A-Aj, A+Aj, A-Aj, A-Aj, A+Aj, -A+Aj, -A+Aj |
| 3 | Polarization 1 | -A+Aj, -A+Aj, A-Aj, A-Aj, A+Aj, A+Aj, -A-Aj, A-Aj, A+Aj, A-Aj, A-Aj, -A+Aj, -A-Aj, -A-Aj, A-Aj, - A+Aj, A-Aj, A+Aj, A-Aj, -A+Aj, -A-Aj, A+Aj, A+Aj, A-Aj, -A+Aj, A+Aj, A-Aj, -A-Aj, -A+Aj, -A+Aj, A+Aj, A+Aj, -A+Aj, A+Aj, -A+Aj, A-Aj, A+Aj, -A+Aj, -A-Aj, A+Aj, -A-Aj, A+Aj, A-Aj, -A-Aj, -A- Aj, A-Aj, -A-Aj, -A-Aj, -A+Aj, A+Aj, -A-Aj, A+Aj, -A+Aj, -A+Aj, -A+Aj, A+Aj, -A-Aj, -A- Aj, -A-Aj, A-Aj, A-Aj, A+Aj, -A-Aj, -A+Aj, -A+Aj, -A-Aj, A-Aj, A-Aj |
| | Polarization 2 | A+Aj, A+Aj, -A-Aj, -A-Aj, -A+Aj, -A+Aj, A-Aj, -A-Aj, -A+Aj, -A-Aj, -A-Aj, A+Aj, A-Aj, A-Aj, -A- Aj, A+Aj, -A-Aj, -A+Aj, -A-Aj, A+Aj, A-Aj, -A+Aj, -A+Aj, -A-Aj, A+Aj, -A+Aj, -A-Aj, A-Aj, A+Aj, A+Aj, -A+Aj, -A+Aj, A+Aj, -A+Aj, A+Aj, -A-Aj, -A+Aj, A+Aj, A-Aj, -A+Aj, A-Aj, -A+Aj, -A-Aj, A-Aj, A-Aj, A-Aj, A-Aj, A+Aj, -A+Aj, A-Aj, -A+Aj, A+Aj, A+Aj, A+Aj, -A+Aj, A-Aj, A-Aj, A-Aj, -A-Aj, -A-Aj, -A+Aj, A-Aj, A+Aj, A+Aj, A-Aj, -A-Aj, -A-Aj |

(continued)

| Index | Polarization | Pilot sequence |
|---|---|---|
| 4 | Polarization 1 | A-Aj, A-Aj, -A+Aj, -A+Aj, -A-Aj, -A-Aj, A+Aj, -A+Aj, -A-Aj, -A+Aj, -A+Aj, A-Aj, A+Aj, A+Aj, -A+Aj, A-Aj, -A+Aj, -A-Aj, -A+Aj, A-Aj, A+Aj, -A-Aj, -A-Aj, -A+Aj, A-Aj, -A-Aj, -A+Aj, A+Aj, A-Aj, A-Aj, -A-Aj, -A-Aj, A-Aj, -A-Aj, A-Aj, -A+Aj, -A-Aj, A-Aj, A+Aj, -A-Aj, A+Aj, -A-Aj, -A+Aj, A+Aj, - A+Aj, A+Aj, A+Aj, A+Aj, A-Aj, -A-Aj, A+Aj, -A-Aj, A-Aj, A-Aj, A-Aj, -A-Aj, A+Aj, A+Aj, A+Aj, - A+Aj, -A+Aj, -A-Aj, A+Aj, A-Aj, A-Aj, A+Aj, -A+Aj, -A+Aj |
| | Polarization 2 | A+Aj, A+Aj, -A-Aj, -A-Aj, -A+Aj, -A+Aj, A-Aj, -A-Aj, -A+Aj, -A-Aj, -A-Aj, A+Aj, A-Aj, A-Aj, -A-Aj, A+Aj, -A-Aj, -A+Aj, -A-Aj, A+Aj, A-Aj, -A+Aj, -A+Aj, -A-Aj, A+Aj, -A+Aj, -A-Aj, A-Aj, A+Aj, A+Aj, -A+Aj, -A+Aj, A+Aj, -A+Aj, A+Aj, -A-Aj, -A+Aj, A+Aj, A-Aj, -A+Aj, A-Aj, -A+Aj, -A-Aj, A-Aj, -A-Aj, A-Aj, A-Aj, A-Aj, A+Aj, -A+Aj, A-Aj, -A+Aj, A+Aj, A+Aj, A+Aj, -A+Aj, A-Aj, A-Aj, A-Aj, -A-Aj, -A-Aj, -A+Aj, A-Aj, A+Aj, A+Aj, A-Aj, -A-Aj, -A-Aj |
| 5 | Polarization 1 | -A-Aj, A-Aj, -A-Aj, -A+Aj, -A-Aj, A+Aj, -A-Aj, -A+Aj, -A-Aj, -A+Aj, -A+Aj, -A+Aj, A+Aj, -A-Aj, - A+Aj, A-Aj, -A-Aj, -A+Aj, A-Aj, A-Aj, -A-Aj, A-Aj, -A+Aj, -A+Aj, A-Aj, A-Aj, A-Aj, A+Aj, -A+Aj, A-Aj, A+Aj, A-Aj, -A+Aj, -A-Aj, -A-Aj, -A+Aj, A+Aj, A-Aj, A-Aj, A+Aj, A+Aj, A+Aj, A+Aj, -A+Aj, -A-Aj, -A-Aj, A+Aj, A-Aj, A-Aj, -A+Aj, A-Aj, A+Aj, -A-Aj, -A-Aj, -A-Aj, A+Aj, -A-Aj, A+Aj, -A+Aj, - A+Aj, A-Aj, -A-Aj, A+Aj, A+Aj, A-Aj, A+Aj, A+Aj, -A+Aj |
| | Polarization 2 | -A+Aj, A+Aj, -A+Aj, -A-Aj, -A+Aj, A-Aj, -A+Aj, -A-Aj, -A+Aj, -A-Aj, -A-Aj, -A-Aj, A-Aj, -A+Aj, -A-Aj, A+Aj, -A+Aj, -A-Aj, A+Aj, A+Aj, -A+Aj, A+Aj, -A-Aj, -A-Aj, A+Aj, A+Aj, A+Aj, A-Aj, -A-Aj, A+Aj, A-Aj, A+Aj, -A-Aj, -A+Aj, -A+Aj, -A-Aj, A-Aj, A+Aj, A+Aj, A-Aj, A-Aj, A-Aj, A-Aj, -A-Aj, - A+Aj, -A+Aj, A-Aj, A+Aj, A+Aj, -A-Aj, A+Aj, A-Aj, -A+Aj, -A+Aj, -A+Aj, A-Aj, -A+Aj, A-Aj, -A-Aj, -A-Aj, A+Aj, -A+Aj, A-Aj, A-Aj, A+Aj, A-Aj, A-Aj, -A-Aj |
| 6 | Polarization 1 | -A-Aj, A-Aj, -A-Aj, -A+Aj, -A-Aj, A+Aj, -A-Aj, -A+Aj, -A-Aj, -A+Aj, -A+Aj, -A+Aj, A+Aj, -A-Aj, - A+Aj, A-Aj, -A-Aj, -A+Aj, A-Aj, A-Aj, -A-Aj, A-Aj, -A+Aj, -A+Aj, A-Aj, A-Aj, A-Aj, A+Aj, -A+Aj, A-Aj, A+Aj, A-Aj, -A+Aj, -A-Aj, -A-Aj, -A+Aj, A+Aj, A-Aj, A-Aj, A+Aj, A+Aj, A+Aj, A+Aj, -A+Aj, -A-Aj, -A-Aj, A+Aj, A-Aj, A-Aj, -A+Aj, A-Aj, A+Aj, -A-Aj, -A-Aj, -A-Aj, A+Aj, -A-Aj, A+Aj, -A+Aj, - A+Aj, A-Aj, -A-Aj, A+Aj, A+Aj, A-Aj, A+Aj, A+Aj, -A+Aj |
| | Polarization 2 | A-Aj, -A-Aj, A-Aj, A+Aj, A-Aj, -A+Aj, A-Aj, A+Aj, A-Aj, A+Aj, A+Aj, A+Aj, -A+Aj, A-Aj, A+Aj, -A-Aj, A-Aj, A+Aj, -A-Aj, -A-Aj, A-Aj, -A-Aj, A+Aj, A+Aj, -A-Aj, -A-Aj, -A-Aj, -A+Aj, A+Aj, -A-Aj, - A+Aj, -A-Aj, A+Aj, A-Aj, A-Aj, A+Aj, -A+Aj, -A-Aj, -A-Aj, -A+Aj, -A+Aj, -A+Aj, -A+Aj, A+Aj, A-Aj, A-Aj, -A+Aj, -A-Aj, -A-Aj, A+Aj, -A-Aj, -A+Aj, A-Aj, A-Aj, A-Aj, -A+Aj, A-Aj, -A+Aj, A+Aj, A+Aj, -A-Aj, A-Aj, -A+Aj, -A+Aj, -A-Aj, -A+Aj, -A+Aj, A+Aj |
| 7 | Polarization 1 | -A+Aj, A+Aj, -A+Aj, -A-Aj, -A+Aj, A-Aj, -A+Aj, -A-Aj, -A+Aj, -A-Aj, -A-Aj, -A-Aj, A-Aj, -A+Aj, -A-Aj, A+Aj, -A+Aj, -A-Aj, A+Aj, A+Aj, -A+Aj, A+Aj, -A-Aj, -A-Aj, A+Aj, A+Aj, A+Aj, A-Aj, -A-Aj, A+Aj, A-Aj, A+Aj, -A-Aj, -A+Aj, -A+Aj, -A-Aj, A-Aj, A+Aj, A+Aj, A-Aj, A-Aj, A-Aj, A-Aj, -A-Aj, - A+Aj, -A+Aj, A-Aj, A+Aj, A+Aj, -A-Aj, A+Aj, A-Aj, -A+Aj, -A+Aj, -A+Aj, A-Aj, -A+Aj, A-Aj, -A-Aj, -A-Aj, A+Aj, -A+Aj, A-Aj, A-Aj, A+Aj, A-Aj, A-Aj, -A-Aj |
| | Polarization 2 | A+Aj, -A+Aj, A+Aj, A-Aj, A+Aj, -A-Aj, A+Aj, A-Aj, A+Aj, A-Aj, A-Aj, A-Aj, -A-Aj, A+Aj, A-Aj, -A+Aj, A+Aj, A-Aj, -A+Aj, -A+Aj, A+Aj, -A+Aj, A-Aj, A-Aj, -A+Aj, -A+Aj, -A+Aj, -A-Aj, A-Aj, - A+Aj, -A-Aj, -A+Aj, A-Aj, A+Aj, A+Aj, A-Aj, -A-Aj, -A+Aj, -A+Aj, -A-Aj, -A-Aj, -A-Aj, -A-Aj, A-Aj, A+Aj, A+Aj, -A-Aj, -A+Aj, -A+Aj, A-Aj, -A+Aj, -A-Aj, A+Aj, A+Aj, A+Aj, -A-Aj, A+Aj, -A-Aj, A-Aj, A-Aj, -A+Aj, A+Aj, -A-Aj, -A-Aj, -A+Aj, -A-Aj, -A-Aj, A-Aj |
| 8 | Polarization 1 | A-Aj, -A-Aj, A-Aj, A+Aj, A-Aj, -A+Aj, A-Aj, A+Aj, A-Aj, A+Aj, A+Aj, A+Aj, -A+Aj, A-Aj, A+Aj, -A-Aj, A-Aj, A+Aj, -A-Aj, -A-Aj, A-Aj, -A-Aj, A+Aj, A+Aj, -A-Aj, -A-Aj, -A-Aj, -A+Aj, A+Aj, -A-Aj, - A+Aj, -A-Aj, A+Aj, A-Aj, A-Aj, A+Aj, -A+Aj, -A-Aj, -A-Aj, -A+Aj, -A+Aj, -A+Aj, -A+Aj, A+Aj, A-Aj, A-Aj, -A+Aj, -A-Aj, -A-Aj, A+Aj, -A-Aj, -A+Aj, A-Aj, A-Aj, A-Aj, -A+Aj, A-Aj, -A+Aj, A+Aj, A+Aj, -A-Aj, A-Aj, -A+Aj, -A+Aj, -A-Aj, -A+Aj, -A+Aj, A+Aj |
| | Polarization 2 | A+Aj, -A+Aj, A+Aj, A-Aj, A+Aj, -A-Aj, A+Aj, A-Aj, A+Aj, A-Aj, A-Aj, A-Aj, -A-Aj, A+Aj, A-Aj, -A+Aj, A+Aj, A-Aj, -A+Aj, -A+Aj, A+Aj, -A+Aj, A-Aj, A-Aj, -A+Aj, -A+Aj, -A+Aj, -A-Aj, A-Aj, - A+Aj, -A-Aj, -A+Aj, A-Aj, A+Aj, A+Aj, A-Aj, -A-Aj, -A+Aj, -A+Aj, -A-Aj, -A-Aj, -A-Aj, -A-Aj, A-Aj, A+Aj, A+Aj, -A-Aj, -A+Aj, -A+Aj, A-Aj, -A+Aj, -A-Aj, A+Aj, A+Aj, A+Aj, -A-Aj, A+Aj, -A-Aj, A-Aj, A-Aj, -A+Aj, A+Aj, -A-Aj, -A-Aj, -A+Aj, -A-Aj, -A-Aj, A-Aj |

(continued)

| Index | Polarization | Pilot sequence |
|---|---|---|
| 9 | Polarization 1 | -A-Aj, -A+Aj, -A+Aj, A+Aj, -A+Aj, -A+Aj, A-Aj, A+Aj, -A-Aj, -A-Aj, -A+Aj, A-Aj, -A+Aj, A-Aj, A-Aj, A-Aj, -A+Aj, A+Aj, -A-Aj, A+Aj, A+Aj, -A+Aj, A-Aj, A-Aj, -A-Aj, -A+Aj, -A+Aj, -A+Aj, -A+Aj, A+Aj, A+Aj, -A+Aj, -A-Aj, A-Aj, A-Aj, -A-Aj, A+Aj, -A+Aj, A+Aj, -A-Aj, -A+Aj, A+Aj, A+Aj, A+Aj, -A-Aj, -A-Aj, A+Aj, A-Aj, A+Aj, A+Aj, -A-Aj, A-Aj, A+Aj, -A-Aj, A-Aj, -A+Aj, -A-Aj, -A-Aj, -A-Aj, A-Aj, -A-Aj, A-Aj, -A+Aj, A-Aj, -A-Aj, A-Aj, A+Aj, A-Aj |
| | Polarization 2 | -A+Aj, -A-Aj, -A-Aj, A-Aj, -A-Aj, -A-Aj, A+Aj, A-Aj, -A+Aj, -A+Aj, -A-Aj, A+Aj, -A-Aj, A+Aj, A+Aj, A+Aj, -A-Aj, A-Aj, -A+Aj, A-Aj, A-Aj, -A-Aj, A+Aj, A+Aj, -A+Aj, -A-Aj, -A-Aj, -A-Aj, -A-Aj, A-Aj, A-Aj, -A-Aj, -A+Aj, A+Aj, A+Aj, -A+Aj, A-Aj, -A-Aj, A-Aj, -A+Aj, -A-Aj, A-Aj, A-Aj, A-Aj, -A+Aj, - A+Aj, A-Aj, A+Aj, A-Aj, A-Aj, -A+Aj, A+Aj, A-Aj, -A+Aj, A+Aj, -A-Aj, -A+Aj, -A+Aj, -A+Aj, A+Aj, -A+Aj, A+Aj, -A-Aj, A+Aj, -A+Aj, A+Aj, A-Aj, A+Aj |
| 10 | Polarization 1 | -A-Aj, -A+Aj, -A+Aj, A+Aj, -A+Aj, -A+Aj, A-Aj, A+Aj, -A-Aj, -A-Aj, -A+Aj, A-Aj, -A+Aj, A-Aj, A-Aj, A-Aj, -A+Aj, A+Aj, -A-Aj, A+Aj, A+Aj, -A+Aj, A-Aj, A-Aj, -A-Aj, -A+Aj, -A+Aj, -A+Aj, -A+Aj, A+Aj, A+Aj, -A+Aj, -A-Aj, A-Aj, A-Aj, -A-Aj, A+Aj, -A+Aj, A+Aj, -A-Aj, -A+Aj, A+Aj, A+Aj, -A-Aj, -A-Aj, A+Aj, A-Aj, A+Aj, A+Aj, -A-Aj, A-Aj, A+Aj, -A-Aj, A-Aj, -A+Aj, -A-Aj, -A-Aj, -A-Aj, A-Aj, -A-Aj, A-Aj, -A+Aj, A-Aj, -A-Aj, A-Aj, A+Aj, A-Aj |
| | Polarization 2 | A-Aj, A+Aj, A+Aj, -A+Aj, A+Aj, A+Aj, -A-Aj, -A+Aj, A-Aj, A-Aj, A+Aj, -A-Aj, A+Aj, -A-Aj, -A-Aj, - A-Aj, A+Aj, -A+Aj, A-Aj, -A+Aj, -A+Aj, A+Aj, -A-Aj, -A-Aj, A-Aj, A+Aj, A+Aj, A+Aj, A+Aj, -A+Aj, -A+Aj, A+Aj, A-Aj, -A-Aj, -A-Aj, A-Aj, -A+Aj, A+Aj, -A+Aj, A-Aj, A+Aj, -A+Aj, -A+Aj, -A+Aj, A-Aj, A-Aj, -A+Aj, -A-Aj, -A+Aj, -A+Aj, A-Aj, -A-Aj, -A+Aj, A-Aj, -A-Aj, A+Aj, A-Aj, A-Aj, A-Aj, -A-Aj, A-Aj, -A-Aj, A+Aj, -A-Aj, A-Aj, -A-Aj, -A+Aj, -A-Aj |
| 11 | Polarization 1 | -A+Aj, -A-Aj, -A-Aj, A-Aj, -A-Aj, -A-Aj, A+Aj, A-Aj, -A+Aj, -A+Aj, -A-Aj, A+Aj, -A-Aj, A+Aj, A+Aj, A+Aj, -A-Aj, A-Aj, -A+Aj, A-Aj, A-Aj, -A-Aj, A+Aj, A+Aj, -A+Aj, -A-Aj, -A-Aj, -A-Aj, -A-Aj, A-Aj, A-Aj, -A-Aj, -A+Aj, A+Aj, A+Aj, -A+Aj, A-Aj, -A-Aj, A-Aj, -A+Aj, -A-Aj, A-Aj, A-Aj, A-Aj, A-Aj, -A+Aj, - A+Aj, A-Aj, A+Aj, A-Aj, A-Aj, -A+Aj, A+Aj, A-Aj, -A+Aj, A+Aj, -A-Aj, -A+Aj, -A+Aj, -A+Aj, A+Aj, -A+Aj, A+Aj, -A-Aj, A+Aj, -A+Aj, A+Aj, A-Aj, A+Aj |
| | Polarization 2 | A+Aj, A-Aj, A-Aj, -A-Aj, A-Aj, A-Aj, -A+Aj, -A-Aj, A+Aj, A+Aj, A-Aj, -A+Aj, A-Aj, -A+Aj, -A+Aj, -A+Aj, A-Aj, -A-Aj, A+Aj, -A-Aj, -A-Aj, A-Aj, -A+Aj, -A+Aj, A+Aj, A-Aj, A-Aj, A-Aj, A-Aj, -A-Aj, -A-Aj, A-Aj, A+Aj, -A+Aj, -A+Aj, A+Aj, -A-Aj, A-Aj, -A-Aj, A+Aj, A-Aj, -A-Aj, -A-Aj, -A-Aj, A+Aj, A+Aj, -A-Aj, -A+Aj, -A-Aj, -A-Aj, A+Aj, -A+Aj, -A-Aj, A+Aj, -A+Aj, A-Aj, A+Aj, A+Aj, A+Aj, - A+Aj, A+Aj, -A+Aj, A-Aj, -A+Aj, A+Aj, -A+Aj, -A-Aj, -A+Aj |
| 12 | Polarization 1 | A-Aj, A+Aj, A+Aj, -A+Aj, A+Aj, A+Aj, -A-Aj, -A+Aj, A-Aj, A-Aj, A+Aj, -A-Aj, A+Aj, -A-Aj, -A-Aj, - A-Aj, A+Aj, -A+Aj, A-Aj, -A+Aj, -A+Aj, A+Aj, -A-Aj, -A-Aj, A-Aj, A+Aj, A+Aj, A+Aj, A+Aj, -A+Aj, -A+Aj, A+Aj, A-Aj, -A-Aj, -A-Aj, A-Aj, -A+Aj, A+Aj, -A+Aj, A-Aj, A+Aj, -A+Aj, -A+Aj, -A+Aj, A-Aj, A-Aj, -A+Aj, -A-Aj, -A+Aj, -A+Aj, A-Aj, -A-Aj, -A+Aj, A-Aj, -A-Aj, A+Aj, A-Aj, A-Aj, A-Aj, -A-Aj, A-Aj, -A-Aj, A-Aj, -A-Aj, A+Aj, -A-Aj, A-Aj, -A-Aj, -A+Aj, -A-Aj |
| | Polarization 2 | A+Aj, A-Aj, A-Aj, -A-Aj, A-Aj, A-Aj, -A+Aj, -A-Aj, A+Aj, A+Aj, A-Aj, -A+Aj, A-Aj, -A+Aj, -A+Aj, - A+Aj, A-Aj, -A-Aj, A+Aj, -A-Aj, -A-Aj, A-Aj, -A+Aj, -A+Aj, A+Aj, A-Aj, A-Aj, A-Aj, A-Aj, -A-Aj, -A-Aj, A-Aj, A+Aj, -A+Aj, -A+Aj, A+Aj, -A-Aj, A-Aj, -A-Aj, A+Aj, A-Aj, -A-Aj, -A-Aj, -A-Aj, A+Aj, A+Aj, -A-Aj, -A+Aj, -A-Aj, -A-Aj, A+Aj, -A+Aj, -A-Aj, A+Aj, -A+Aj, A-Aj, A+Aj, A+Aj, A+Aj, - A+Aj, A+Aj, -A+Aj, A-Aj, -A+Aj, A+Aj, -A+Aj, -A-Aj, -A+Aj |
| 13 | Polarization 1 | -A-Aj, -A+Aj, -A-Aj, A-Aj, -A+Aj, -A-Aj, -A+Aj, A-Aj, A-Aj, A+Aj, -A+Aj, A-Aj, A-Aj, A+Aj, A-Aj, - A-Aj, A+Aj, -A+Aj, A-Aj, -A-Aj, A-Aj, A+Aj, -A+Aj, A+Aj, -A+Aj, A+Aj, -A+Aj, -A-Aj, A+Aj, -A+Aj, -A+Aj, -A+Aj, -A+Aj, -A-Aj, A+Aj, A+Aj, -A-Aj, -A-Aj, -A-Aj, -A-Aj, A+Aj, A-Aj, -A+Aj, A-Aj, -A-Aj, -A-Aj, -A+Aj, A-Aj, A+Aj, A+Aj, A+Aj, -A-Aj, -A-Aj, A+Aj, A-Aj, A-Aj, -A-Aj, -A+Aj, A-Aj, - A+Aj, A-Aj, A-Aj, -A+Aj, -A-Aj, A+Aj, A+Aj, A+Aj, A-Aj |
| | Polarization 2 | A-Aj, A+Aj, A+Aj, -A-Aj, -A+Aj, A+Aj, -A-Aj, -A-Aj, A-Aj, -A+Aj, A-Aj, A+Aj, -A+Aj, A-Aj, -A+Aj, - A+Aj, A+Aj, A-Aj, A+Aj, -A+Aj, A+Aj, A-Aj, -A+Aj, -A-Aj, A-Aj, A+Aj, -A+Aj, -A-Aj, A+Aj, A-Aj, A+Aj, -A-Aj, A+Aj, -A-Aj, A+Aj, A-Aj, A-Aj, A+Aj, A+Aj, A+Aj, A+Aj, A-Aj, A-Aj, -A-Aj, A-Aj, -A-Aj, -A-Aj, -A-Aj, A-Aj, -A+Aj, -A+Aj, -A+Aj, -A-Aj, -A-Aj, -A+Aj, -A+Aj, A-Aj, -A-Aj, -A-Aj, A-Aj, - A-Aj, A-Aj, -A+Aj, A+Aj, -A-Aj, -A+Aj, -A+Aj, -A+Aj |

(continued)

| Index | Polarization | Pilot sequence |
|---|---|---|
| 14 | Polarization 1 | -A+Aj, A+Aj, A+Aj, A+Aj, -A-Aj, A-Aj, -A+Aj, -A+Aj, A-Aj, -A+Aj, A-Aj, -A-Aj, -A+Aj, -A+Aj, A+Aj, -A-Aj, -A-Aj, A+Aj, A+Aj, A+Aj, -A+Aj, A-Aj, -A-Aj, -A-Aj, -A+Aj, A-Aj, -A+Aj, A+Aj, -A-Aj, -A-Aj, -A-Aj, -A-Aj, A+Aj, A+Aj, -A-Aj, A-Aj, A-Aj, A-Aj, A-Aj, A+Aj, -A-Aj, A-Aj, A+Aj, A-Aj, A+Aj, A-Aj, A+Aj, -A+Aj, -A-Aj, -A+Aj, A-Aj, A+Aj, -A-Aj, -A+Aj, A+Aj, -A+Aj, -A+Aj, A-Aj, A+Aj, -A+Aj, -A+Aj, A-Aj, -A-Aj, A-Aj, -A+Aj, -A-Aj, A-Aj, -A-Aj |
|  | Polarization 2 | A-Aj, A-Aj, A-Aj, -A-Aj, A+Aj, A-Aj, -A+Aj, -A-Aj, -A+Aj, -A-Aj, -A-Aj, A+Aj, A-Aj, A-Aj, -A-Aj, - A-Aj, A-Aj, A-Aj, A-Aj, -A+Aj, -A-Aj, -A-Aj, -A-Aj, -A+Aj, -A-Aj, -A+Aj, -A+Aj, A+Aj, A+Aj, A+Aj, A+Aj, -A+Aj, -A+Aj, A+Aj, -A-Aj, A+Aj, -A-Aj, A+Aj, -A+Aj, A+Aj, -A-Aj, A-Aj, A+Aj, -A+Aj, -A-Aj, A-Aj, -A+Aj, A+Aj, A-Aj, A+Aj, -A+Aj, A+Aj, A-Aj, A-Aj, -A+Aj, A-Aj, A+Aj, -A+Aj, A-Aj, - A+Aj, -A-Aj, -A-Aj, A+Aj, A-Aj, -A-Aj, A+Aj, A+Aj, -A+Aj |

**Table 16-2**

| Index | Polarization | Pilot sequence |
|---|---|---|
| 1 | Polarization 1 | -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj |
|  | Polarization 2 | -A+Aj, -A-Aj, A-Aj, A-Aj, -A-Aj, -A+Aj, A-Aj, A-Aj, -A-Aj, A-Aj, A+Aj, -A+Aj, A+Aj, A-Aj, A+Aj, - A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj. -A+Aj, A-Aj, A-Aj, A+Aj |
| 2 | Polarization 1 | -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, - A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj |
|  | Polarization 2 | A-Aj, A+Aj, -A+Aj, -A+Aj, A+Aj, A-Aj, -A+Aj, -A+Aj, A+Aj, -A+Aj, -A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, -A-Aj, -A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj |
| 3 | Polarization 1 | A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj, - A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj. -A-Aj, A+Aj, A+Aj, -A-Aj, A+Aj, -A-Aj, A-Aj, -A+Aj, -A-Aj, - A+Aj, -A+Aj, -A+Aj, -A+Aj, A-Aj, A+Aj, -A-Aj, A+Aj, A+Aj, A+Aj, A-Aj, A+Aj, -A+Aj, -A+Aj, -A-Aj, -A-Aj, -A-Aj, A+Aj, -A+Aj, A+Aj, A+Aj, -A-Aj, -A-Aj, -A+Aj |
|  | Polarization 2 | -A+Aj, -A-Aj, A-Aj, A-Aj, -A-Aj, -A+Aj, A-Aj, A-Aj, -A-Aj, A-Aj, A+Aj, -A+Aj, A+Aj, A-Aj, A+Aj, - A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A+Aj, -A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj. -A+Aj, A-Aj, A-Aj, A+Aj |

(continued)

| Index | Polarization | Pilot sequence |
|---|---|---|
| 4 | Polarization 1 | A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj. -A-Aj, A+Aj, A+Aj, -A-Aj, A+Aj, -A-Aj, A-Aj, -A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, -A+Aj, -A-Aj, -A-Aj, -A-Aj, A+Aj, -A+Aj, A+Aj, A+Aj, -A-Aj, -A-Aj, -A+Aj |
| | Polarization 2 | A-Aj, A+Aj, -A+Aj, -A+Aj, A+Aj, A-Aj, -A+Aj, -A+Aj, A+Aj, -A+Aj, -A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, A-Aj, -A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj |
| 5 | Polarization 1 | -A+Aj, A+Aj, A+Aj, -A-Aj, -A-Aj, -A+Aj, -A-Aj, A+Aj, A+Aj, A+Aj, -A+Aj, -A+Aj, -A-Aj, A-Aj, -A-Aj, -A-Aj, -A-Aj, A+Aj, -A-Aj, A-Aj, -A+Aj, -A+Aj, -A+Aj, -A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, -A-Aj, -A+Aj, -A+Aj, A-Aj, A-Aj, - A+Aj, A-Aj, A-Aj, A+Aj, -A-Aj, -A+Aj, A-Aj, A+Aj, A-Aj, -A+Aj, A+Aj, -A+Aj, -A-Aj, -A+Aj, A+Aj, A-Aj, A+Aj, A+Aj, -A-Aj, A-Aj, A+Aj, A+Aj, A-Aj, -A-Aj |
| | Polarization 2 | -A-Aj, A-Aj, A-Aj, -A+Aj, -A+Aj, -A-Aj, -A+Aj, A-Aj, A-Aj, A-Aj, -A-Aj, -A-Aj, -A+Aj, A+Aj, - A+Aj, -A+Aj, -A+Aj, A-Aj, -A+Aj, A+Aj, -A-Aj, -A-Aj, -A-Aj, -A-Aj, A-Aj, -A-Aj, A+Aj, A-Aj, - A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj, -A+Aj, -A-Aj, A+Aj, A-Aj, A+Aj, -A-Aj, A-Aj, -A-Aj, -A+Aj, -A-Aj, A-Aj, A+Aj, A-Aj, A-Aj, -A+Aj, A+Aj, A-Aj, A-Aj, A+Aj, -A+Aj |
| 6 | Polarization 1 | -A+Aj, A+Aj, A+Aj, -A-Aj, -A-Aj, -A+Aj, -A-Aj, A+Aj, A+Aj, A+Aj, -A+Aj, -A+Aj, -A-Aj, A-Aj, -A-Aj, -A-Aj, -A-Aj, A+Aj, -A-Aj, A-Aj, -A+Aj, -A+Aj, -A+Aj, -A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, -A-Aj, -A+Aj, -A+Aj, A-Aj, A-Aj, - A+Aj, A-Aj, A-Aj, A+Aj, -A-Aj, -A+Aj, A-Aj, A+Aj, A-Aj, -A+Aj, A+Aj, -A+Aj, -A-Aj, -A+Aj, A+Aj, A-Aj, A+Aj, A+Aj, -A-Aj, A-Aj, A+Aj, A+Aj, A-Aj, -A-Aj |
| | Polarization 2 | A+Aj, -A+Aj, -A+Aj, A-Aj, A-Aj, A+Aj, A-Aj, -A+Aj, -A+Aj, -A+Aj, A+Aj, A+Aj, A-Aj, -A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, -A-Aj, A-Aj, A+Aj, A+Aj, -A-Aj, -A-Aj, A+Aj, - A-Aj, -A-Aj, -A+Aj, A-Aj, A+Aj, -A-Aj, -A+Aj, -A-Aj, A+Aj, -A+Aj, A+Aj, A-Aj, A+Aj, -A+Aj, -A-Aj, -A+Aj, -A+Aj, A-Aj, -A-Aj, -A+Aj, -A+Aj, -A-Aj, A-Aj |
| 7 | Polarization 1 | A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, -A-Aj, -A+Aj, A+Aj, -A+Aj, A+Aj, -A+Aj, -A+Aj, A+Aj, A-Aj, A-Aj, -A+Aj, -A+Aj, A-Aj, -A+Aj, -A+Aj, -A-Aj, A+Aj, A-Aj, -A+Aj, -A-Aj, -A+Aj, A-Aj, -A-Aj, A-Aj, A+Aj, A-Aj, -A-Aj, - A+Aj, -A-Aj, -A-Aj, A+Aj, -A+Aj, -A-Aj, -A-Aj, -A+Aj, A+Aj |
| | Polarization 2 | -A-Aj, A-Aj, A-Aj, -A+Aj, -A+Aj, -A-Aj, -A+Aj, A-Aj, A-Aj, A-Aj, -A-Aj, -A-Aj, -A+Aj, A+Aj, - A+Aj, -A+Aj, -A+Aj, A-Aj, -A+Aj, A+Aj, -A-Aj, -A-Aj, -A-Aj, -A-Aj, A-Aj, -A-Aj, A+Aj, A-Aj, - A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj, -A+Aj, -A-Aj, A+Aj, A-Aj, A+Aj, -A-Aj, A-Aj, -A-Aj, -A+Aj, -A-Aj, A-Aj, A+Aj, A-Aj, A-Aj, -A+Aj, A+Aj, A-Aj, A-Aj, A+Aj, -A+Aj |
| 8 | Polarization 1 | A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, -A-Aj, -A+Aj, A+Aj, -A+Aj, A+Aj, -A+Aj, -A+Aj, A+Aj, A-Aj, A-Aj, -A+Aj, -A+Aj, A-Aj, -A+Aj, -A+Aj, -A-Aj, A+Aj, A-Aj, -A+Aj, -A-Aj, -A+Aj, A-Aj, -A-Aj, A-Aj, A+Aj, A-Aj, -A-Aj, - A+Aj, -A-Aj, -A-Aj, A+Aj, -A+Aj, -A-Aj, -A-Aj, -A+Aj, A+Aj |
| | Polarization 2 | A+Aj, -A+Aj, -A+Aj, A-Aj, A-Aj, A+Aj, A-Aj, -A+Aj, -A+Aj, -A+Aj, A+Aj, A+Aj, A-Aj, -A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, -A-Aj, A-Aj, A+Aj, A+Aj, -A-Aj, -A-Aj, A+Aj, - A-Aj, -A-Aj, -A+Aj, A-Aj, A+Aj, -A-Aj, -A+Aj, -A-Aj, A+Aj, -A+Aj, A+Aj, A-Aj, A+Aj, -A+Aj, -A-Aj, -A+Aj, -A+Aj, A-Aj, -A-Aj, -A+Aj, -A+Aj, -A-Aj, A-Aj |

(continued)

| Index | Polarization | Pilot sequence |
|---|---|---|
| 9 | Polarization 1 | -A-Aj, -A+Aj, -A+Aj, A-Aj, -A-Aj, A+Aj, -A+Aj, -A+Aj, A-Aj, -A+Aj, A-Aj, -A+Aj, A-Aj, A+Aj, A+Aj, -A-Aj, A+Aj, A+Aj, -A-Aj, -A-Aj, A-Aj, -A-Aj, A-Aj, -A-Aj, -A-Aj, A-Aj, -A+Aj, -A-Aj, A-Aj, -A+Aj, A+Aj, -A+Aj, -A-Aj, A-Aj, A+Aj, A+Aj, -A+Aj, -A+Aj, -A+Aj, -A+Aj, -A+Aj, A-Aj, -A-Aj, A-Aj, A-Aj, -A-Aj, A-Aj, -A-Aj, A+Aj, -A-Aj, A+Aj, -A-Aj, -A-Aj, A+Aj, -A+Aj, A-Aj, A+Aj, -A+Aj, -A-Aj, A+Aj, A-Aj, A+Aj, A-Aj, -A-Aj, A+Aj, A+Aj, A+Aj, A+Aj |
| | Polarization 2 | -A+Aj, A-Aj, -A-Aj, A-Aj, -A+Aj, A-Aj, -A-Aj, -A-Aj, -A+Aj, A-Aj, -A+Aj, A+Aj, A+Aj, -A-Aj, A-Aj, A-Aj, -A-Aj, A+Aj, A+Aj, A-Aj, -A-Aj, A-Aj, -A+Aj, -A+Aj, A-Aj, A-Aj, -A+Aj, -A-Aj, A+Aj, -A+Aj, -A-Aj, A+Aj, -A+Aj, -A+Aj, -A-Aj, -A-Aj, -A+Aj, -A+Aj, -A+Aj, -A-Aj, -A-Aj, A-Aj, A+Aj, A+Aj, -A-Aj, A-Aj, -A-Aj, -A+Aj, -A-Aj, A+Aj, -A+Aj, A+Aj, -A+Aj, A+Aj, -A+Aj, A-Aj, A-Aj, A+Aj, A-Aj, A-Aj, A+Aj, A+Aj, A-Aj, -A-Aj, -A+Aj, A+Aj, A+Aj, A-Aj |
| 10 | Polarization 1 | A+Aj, -A-Aj, -A+Aj, -A+Aj, A-Aj, -A-Aj, A+Aj, -A+Aj, -A+Aj, A-Aj, -A+Aj, A-Aj, -A+Aj, A-Aj, A+Aj, A+Aj, -A-Aj, A+Aj, A+Aj, -A-Aj, -A-Aj, A-Aj, -A-Aj, A-Aj, -A-Aj, -A-Aj, A-Aj, -A+Aj, -A-Aj, A-Aj, -A+Aj, A+Aj, -A+Aj, -A-Aj, A-Aj, A+Aj, A+Aj, -A+Aj, -A+Aj, -A+Aj, -A+Aj, -A+Aj, A-Aj, - A-Aj, A-Aj, A-Aj, -A-Aj, A-Aj, -A-Aj, A+Aj, -A-Aj, A+Aj, -A-Aj, -A-Aj, A+Aj, -A+Aj, A-Aj, A+Aj, - A+Aj, -A-Aj, A+Aj, A-Aj, A+Aj, A-Aj, -A-Aj, A+Aj, A+Aj, A+Aj |
| | Polarization 2 | -A+Aj, A-Aj, -A-Aj, A-Aj, -A+Aj, A-Aj, -A-Aj, -A-Aj, -A+Aj, A-Aj, -A+Aj, A+Aj, A+Aj, -A-Aj, A-Aj, A-Aj, -A-Aj, A+Aj, A+Aj, A-Aj, -A-Aj, A-Aj, -A+Aj, -A+Aj, A-Aj, A-Aj, -A+Aj, -A-Aj, A+Aj, -A+Aj, -A-Aj, A+Aj, -A+Aj, -A+Aj, -A-Aj, -A-Aj, -A+Aj, -A+Aj, -A+Aj, -A-Aj, -A-Aj, A-Aj, A+Aj, A+Aj, -A-Aj, A-Aj, -A-Aj, -A+Aj, -A-Aj, A+Aj, -A+Aj, A+Aj, -A+Aj, A+Aj, -A+Aj, A-Aj, A-Aj, A+Aj, A-Aj, A-Aj, A+Aj, A+Aj, A-Aj, -A-Aj, -A+Aj, A+Aj, A+Aj, A-Aj |
| 11 | Polarization 1 | A+Aj, -A-Aj, -A+Aj, -A-Aj, A-Aj, A+Aj, -A+Aj, A-Aj, -A+Aj, -A-Aj, A+Aj, -A+Aj, -A-Aj, -A-Aj, A+Aj, -A+Aj, -A-Aj, -A+Aj, -A+Aj, A+Aj, A+Aj, A-Aj, A+Aj, A+Aj, A+Aj, A+Aj, -A-Aj, -A-Aj, A+Aj, A-Aj, A-Aj, -A+Aj, A+Aj, A+Aj, -A-Aj, A-Aj, A+Aj, -A-Aj, A+Aj, A-Aj, A-Aj, A+Aj, -A-Aj, - A-Aj, -A-Aj, A-Aj, -A+Aj, -A-Aj, A+Aj, -A-Aj, A-Aj, A-Aj, -A-Aj, A-Aj, A-Aj, -A+Aj, -A+Aj, A-Aj, - A-Aj, -A+Aj, A+Aj, A-Aj, -A+Aj, A-Aj, -A-Aj, -A+Aj, -A+Aj, -A+Aj |
| | Polarization 2 | -A-Aj, A-Aj, A-Aj, A+Aj, A+Aj, A+Aj, A-Aj, A-Aj, A-Aj, -A-Aj, -A+Aj, -A-Aj, -A+Aj, A+Aj, A-Aj, A+Aj, -A+Aj, A+Aj, -A+Aj, -A+Aj, A+Aj, A-Aj, A-Aj, A-Aj, A+Aj, -A-Aj, -A+Aj, A-Aj, -A-Aj, A-Aj, A+Aj, -A+Aj, -A-Aj, A-Aj, A+Aj, A+Aj, -A+Aj, A-Aj, -A-Aj, A+Aj, A+Aj, -A-Aj, -A-Aj, -A+Aj, - A+Aj, -A+Aj, -A+Aj, A+Aj, -A+Aj, -A-Aj, A-Aj, -A+Aj, -A-Aj, A-Aj, A-Aj, -A-Aj, -A+Aj, A+Aj, -A-Aj, A-Aj, -A+Aj, -A-Aj, -A+Aj, A+Aj, -A+Aj, A-Aj, -A-Aj, -A-Aj |
| 12 | Polarization 1 | A+Aj, A+Aj, A+Aj, -A-Aj, -A+Aj, A+Aj, -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, -A-Aj, -A-Aj, -A+Aj, -A-Aj, -A+Aj, -A-Aj, -A-Aj, A+Aj, A+Aj, -A-Aj, A+Aj, A+Aj, -A+Aj, A-Aj, -A+Aj, A-Aj, - A+Aj, A-Aj, A-Aj, A+Aj, -A-Aj, -A+Aj, A-Aj, A-Aj, -A-Aj, A+Aj |
| | Polarization 2 | -A+Aj, A+Aj, A+Aj, A-Aj, -A-Aj, -A+Aj, A+Aj, A+Aj, -A+Aj, -A+Aj, A+Aj, -A+Aj, -A+Aj, A-Aj, A+Aj, A-Aj, A+Aj, A-Aj, A+Aj, -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, -A-Aj, A-Aj, -A+Aj, -A+Aj, A-Aj, A-Aj, -A+Aj, -A-Aj, -A+Aj, A+Aj, A+Aj, -A-Aj, -A+Aj, -A+Aj, -A-Aj, A+Aj, A+Aj, A-Aj, - A+Aj, A-Aj, -A-Aj, -A-Aj, -A+Aj, A-Aj, -A+Aj, -A-Aj, -A+Aj, A-Aj |
| 13 | Polarization 1 | A+Aj, A+Aj, A+Aj, A+Aj, -A-Aj, -A+Aj, A+Aj, -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, -A-Aj, -A-Aj, -A-Aj, -A+Aj, -A-Aj, -A+Aj, -A-Aj, -A-Aj, A+Aj, A+Aj, -A-Aj, A+Aj, A+Aj, -A+Aj, A-Aj, -A+Aj, A-Aj, -A+Aj, A-Aj, A-Aj, A+Aj, -A-Aj, -A+Aj, A-Aj, A-Aj, -A-Aj |
| | Polarization 2 | -A+Aj, A+Aj, A+Aj, A-Aj, -A-Aj, -A+Aj, A+Aj, A+Aj, -A+Aj, -A+Aj, A+Aj, -A+Aj, -A+Aj, A-Aj, A+Aj, A-Aj, A+Aj, A-Aj, A+Aj, -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, -A-Aj, A-Aj, -A+Aj, -A+Aj, A-Aj, A-Aj, -A+Aj, -A-Aj, A-Aj, -A+Aj, A+Aj, A+Aj, -A-Aj, -A+Aj, -A+Aj, -A-Aj, A+Aj, A+Aj, A-Aj, - A+Aj, A-Aj, -A-Aj, -A-Aj, -A+Aj, A-Aj, -A+Aj, -A-Aj, -A+Aj, A-Aj |

(continued)

| Index | Polarization | Pilot sequence |
|---|---|---|
| 14 | Polarization 1 | A-Aj, A-Aj, A-Aj, -A-Aj, -A+Aj, A-Aj, -A+Aj, A+Aj, A-Aj, -A-Aj, -A+Aj, A-Aj, A-Aj, -A+Aj, -A+Aj, -A-Aj, -A+Aj, -A+Aj, -A-Aj, A+Aj, -A-Aj, A-Aj, -A+Aj, -A-Aj, -A-Aj, -A-Aj, A+Aj, -A+Aj, -A+Aj, A+Aj, -A-Aj, A+Aj, -A+Aj, -A-Aj, A+Aj, A+Aj, A-Aj, -A+Aj, -A+Aj, A+Aj, -A-Aj, -A-Aj, A+Aj, A+Aj, A+Aj, A+Aj, -A+Aj, A+Aj, A+Aj, A-Aj, A-Aj, -A-Aj, A-Aj, A+Aj, -A-Aj, -A-Aj, A-Aj, A+Aj, - A-Aj, A-Aj, -A+Aj, A-Aj, A+Aj, -A+Aj, -A-Aj, A-Aj, -A-Aj, A+Aj |
| | Polarization 2 | -A-Aj, -A-Aj, -A+Aj, A-Aj, A+Aj, A-Aj, -A-Aj, A-Aj, -A+Aj, -A-Aj, A+Aj, A-Aj, -A-Aj, -A+Aj, - A+Aj, -A-Aj, A-Aj, -A+Aj, -A-Aj, A-Aj, A+Aj, A-Aj, A-Aj, A-Aj, A-Aj, -A-Aj, -A-Aj, A+Aj, A+Aj, - A-Aj, -A+Aj, A-Aj, A+Aj, A+Aj, -A+Aj, -A-Aj, A-Aj, A+Aj, -A+Aj, -A-Aj, -A+Aj, A-Aj, -A-Aj, A+Aj, -A+Aj, -A+Aj, -A+Aj, A+Aj, A-Aj, A-Aj, A+Aj, A-Aj, A+Aj, -A+Aj, A+Aj, A-Aj, -A-Aj, A-Aj, -A-Aj, -A+Aj, -A+Aj, -A+Aj, A+Aj, A+Aj, A+Aj, -A+Aj, -A+Aj, -A-Aj |

(10) When $N_{PS}$ = 70, the pilot sequence is one item in the following Table 17.

**Table 17**

| Index | Polarization | Pilot sequence |
|---|---|---|
| 1 | Polarization 1 | -A+Aj, A-Aj, A-Aj, -A+Aj, A-Aj, -A+Aj, A+Aj, -A+Aj, -A-Aj, -A-Aj, A-Aj, -A-Aj, A+Aj, -A+Aj, A+Aj, - A+Aj, A+Aj, A-Aj, -A+Aj, -A+Aj, -A-Aj, A-Aj, A+Aj, A-Aj, -A-Aj, -A+Aj, A+Aj, A+Aj, -A+Aj, A-Aj, - A+Aj, -A-Aj, A+Aj, A+Aj, -A+Aj, -A+Aj, A+Aj, A+Aj, A-Aj, -A-Aj, A-Aj, -A+Aj, -A-Aj, -A-Aj, -A+Aj, A-Aj, -A-Aj, -A-Aj, -A-Aj, A-Aj, A+Aj, -A+Aj, A-Aj, A-Aj, A-Aj, -A-Aj, A-Aj, A-Aj, A-Aj, A+Aj, -A-Aj, -A+Aj, A+Aj, -A-Aj, A+Aj, -A+Aj, -A-Aj, A+Aj, -A-Aj, A+Aj |
| | Polarization 2 | -A-Aj, A+Aj, A+Aj, -A-Aj, A+Aj, -A-Aj, A-Aj, -A-Aj, -A+Aj, -A+Aj, A+Aj, -A+Aj, A-Aj, -A-Aj, A-Aj, - A-Aj, A-Aj, A+Aj, -A-Aj, -A-Aj, -A+Aj, A+Aj, A-Aj, A+Aj, -A+Aj, -A-Aj, A-Aj, A-Aj, -A-Aj, A+Aj, -A-Aj, -A+Aj, A-Aj, A-Aj, -A-Aj, -A-Aj, A-Aj, A-Aj, A+Aj, -A+Aj, A+Aj, -A-Aj, -A+Aj, -A+Aj, -A-Aj, A+Aj, -A+Aj, -A+Aj, -A+Aj, A+Aj, A-Aj, -A-Aj, A+Aj, A+Aj, A+Aj, -A+Aj, A+Aj, A+Aj, A+Aj, A-Aj, - A+Aj, -A-Aj, A-Aj, -A+Aj, A-Aj, -A-Aj, -A+Aj, A-Aj, -A+Aj, A-Aj |
| 2 | Polarization 1 | -A+Aj, A-Aj, A-Aj, -A+Aj, A-Aj, -A+Aj, A+Aj, -A+Aj, -A-Aj, -A-Aj, A-Aj, -A-Aj, A+Aj, -A+Aj, A+Aj, - A+Aj, A+Aj, A-Aj, -A+Aj, -A+Aj, -A-Aj, A-Aj, A+Aj, A-Aj, -A-Aj, -A+Aj, A+Aj, A+Aj, -A+Aj, A-Aj, - A+Aj, -A-Aj, A+Aj, A+Aj, -A+Aj, -A+Aj, A+Aj, A+Aj, A-Aj, -A-Aj, A-Aj, -A+Aj, -A-Aj, -A-Aj, -A-Aj, -A-Aj, -A+Aj, A-Aj, -A-Aj, -A-Aj, -A-Aj, A-Aj, A+Aj, -A+Aj, A-Aj, A-Aj, A-Aj, -A-Aj, A-Aj, A-Aj, A+Aj, -A-Aj, -A+Aj, A+Aj, -A-Aj, A+Aj, -A+Aj, -A-Aj, A+Aj, -A-Aj, A+Aj |
| | Polarization 2 | A+Aj, -A-Aj, -A-Aj, A+Aj, -A-Aj, A+Aj, -A+Aj, A+Aj, A-Aj, A-Aj, -A-Aj, A-Aj, -A+Aj, A+Aj, -A+Aj, A+Aj, -A+Aj, -A-Aj, A+Aj, A+Aj, A-Aj, -A-Aj, -A+Aj, -A-Aj, A-Aj, A+Aj, -A+Aj, -A+Aj, A+Aj, -A-Aj, A+Aj, A-Aj, -A+Aj, -A+Aj, A+Aj, A+Aj, -A+Aj, -A+Aj, -A-Aj, A-Aj, -A-Aj, A+Aj, A-Aj, A-Aj, A+Aj, - A-Aj, A-Aj, -A-Aj, -A-Aj, -A-Aj, -A-Aj, A-Aj, -A-Aj, -A-Aj, -A+Aj, A-Aj, A+Aj, -A+Aj, A-Aj, -A+Aj, A+Aj, A-Aj, -A+Aj, A-Aj, -A+Aj |
| 3 | Polarization 1 | A-Aj, -A+Aj, -A+Aj, A-Aj, -A+Aj, A-Aj, -A-Aj, A-Aj, A+Aj, A+Aj, -A+Aj, A+Aj, -A-Aj, A-Aj, -A- Aj, A-Aj, -A-Aj, -A+Aj, A-Aj, A-Aj, A+Aj, -A+Aj, -A-Aj, -A+Aj, A+Aj, A-Aj, -A-Aj, -A-Aj, A-Aj, -A+Aj, A-Aj, A+Aj, -A-Aj, -A-Aj, A-Aj, A-Aj, -A-Aj, -A-Aj, -A+Aj, A+Aj, -A+Aj, A-Aj, A+Aj, A+Aj, A-Aj, -A+Aj, A+Aj, A+Aj, A+Aj, -A+Aj, -A-Aj, A-Aj, -A+Aj, -A+Aj, -A+Aj, A+Aj, -A+Aj, -A+Aj, -A-Aj, A+Aj, A-Aj, -A-Aj, A+Aj, -A-Aj, A-Aj. A+Aj, -A-Aj, A+Aj, -A-Aj |
| | Polarization 2 | -A-Aj, A+Aj, A+Aj, -A-Aj, A+Aj, -A-Aj, A-Aj, -A-Aj, -A+Aj, -A+Aj, A+Aj, -A+Aj, A-Aj, -A-Aj, A- Aj, - A-Aj, A-Aj, A+Aj, -A-Aj, -A-Aj, -A+Aj, A+Aj, A-Aj, A+Aj, -A+Aj, -A-Aj, A-Aj, A-Aj, -A-Aj, A+Aj, -A-Aj, -A+Aj, A-Aj, A-Aj, -A-Aj, -A-Aj, A-Aj, A-Aj, A+Aj, -A+Aj, A+Aj, -A-Aj, -A+Aj, -A+Aj, -A-Aj, A+Aj, -A-Aj, A+Aj, -A+Aj, -A+Aj, -A+Aj, A+Aj, A-Aj, -A-Aj, A+Aj, A+Aj, A+Aj, -A+Aj, A+Aj, A+Aj, A-Aj, - A+Aj, -A-Aj, A-Aj, -A+Aj, A-Aj, -A-Aj, -A+Aj, A-Aj, -A+Aj, A-Aj |

(continued)

| Index | Polarization | Pilot sequence |
|---|---|---|
| 4 | Polarization 1 | A-Aj, -A+Aj, -A+Aj, A-Aj, -A+Aj, A-Aj, -A-Aj, A-Aj, A+Aj, A+Aj, -A+Aj, A+Aj, -A-Aj, A-Aj, -A-Aj, A-Aj, -A-Aj, -A+Aj, A-Aj, A-Aj, A+Aj, -A+Aj, -A-Aj, -A+Aj, A+Aj, A-Aj, -A-Aj, -A-Aj, A-Aj, -A+Aj, A-Aj, A+Aj, -A-Aj, -A-Aj, A-Aj, A-Aj, -A-Aj, -A-Aj, -A+Aj, A+Aj, -A+Aj, A-Aj, A+Aj, A+Aj, A-Aj, -A+Aj, A+Aj, A+Aj, A+Aj, -A+Aj, -A-Aj, A-Aj, -A+Aj, -A+Aj, -A+Aj, A+Aj, -A+Aj, -A+Aj, -A+Aj, -A-Aj, A+Aj, A-Aj, -A-Aj, A+Aj, -A-Aj, A-Aj. A+Aj, -A-Aj, A+Aj, -A-Aj |
| | Polarization 2 | A+Aj, -A-Aj, -A-Aj, A+Aj, -A-Aj, A+Aj, -A+Aj, A+Aj, A-Aj, A-Aj, -A-Aj, A-Aj, -A+Aj, A+Aj, -A+Aj, A+Aj, -A+Aj, -A-Aj, A+Aj, A+Aj, A-Aj, -A-Aj, -A+Aj, -A-Aj, A-Aj, A+Aj, -A+Aj, -A+Aj, A+Aj, -A-Aj, A+Aj, A-Aj, -A+Aj, -A+Aj, A+Aj, A+Aj, -A+Aj, -A+Aj, -A-Aj, A-Aj, -A-Aj, A+Aj, A-Aj, A-Aj, A+Aj, - A-Aj, A-Aj, A-Aj, A-Aj, -A-Aj, -A+Aj, A+Aj, -A-Aj, -A-Aj, -A-Aj, A-Aj, -A-Aj, -A-Aj, -A-Aj, -A+Aj, A-Aj, A+Aj, -A+Aj, A-Aj, -A+Aj, A+Aj, A-Aj, -A+Aj, A-Aj, -A+Aj |
| 5 | Polarization 1 | -A-Aj, A+Aj, -A-Aj, A+Aj, -A+Aj, -A-Aj, A+Aj, -A-Aj, -A+Aj, A+Aj, -A-Aj, A-Aj, A-Aj, A-Aj, A+Aj, A-Aj, A-Aj, A-Aj, -A+Aj, -A-Aj, A-Aj, A+Aj, A+Aj, A+Aj, A-Aj, -A+Aj, A+Aj, A+Aj, -A+Aj, A-Aj, A+Aj, A-Aj, -A-Aj, -A-Aj, -A+Aj, -A+Aj, -A-Aj, -A-Aj, A+Aj, -A+Aj, A-Aj, -A+Aj, -A-Aj, -A-Aj, -A+Aj, A+Aj, A-Aj, -A-Aj, A-Aj, A+Aj, -A+Aj, -A+Aj, A-Aj, -A-Aj, -A+Aj, -A-Aj, -A+Aj, -A-Aj, A+Aj, A-Aj, A+Aj, A+Aj, -A+Aj, -A-Aj, -A+Aj, A-Aj, -A+Aj, A-Aj, A-Aj, -A+Aj |
| | Polarization 2 | -A+Aj, A-Aj, -A+Aj, A-Aj, -A-Aj, -A+Aj, A-Aj, -A+Aj, -A-Aj, A-Aj, -A+Aj, A+Aj, A+Aj, A+Aj, A-Aj, A+Aj, A+Aj, A+Aj, -A-Aj, -A+Aj, A+Aj, A-Aj, A-Aj, A-Aj, A+Aj, -A-Aj, A-Aj, A-Aj, -A-Aj, A+Aj, A-Aj, A+Aj, -A+Aj, -A+Aj, -A-Aj, -A-Aj, -A+Aj, -A+Aj, A-Aj, -A-Aj, A+Aj, -A-Aj, -A+Aj, -A+Aj, -A-Aj, A-Aj, A+Aj, -A+Aj, A+Aj, A-Aj, -A-Aj, -A-Aj, A+Aj, -A+Aj, -A-Aj, -A+Aj, -A-Aj, -A+Aj, A-Aj, A+Aj, A-Aj, A-Aj, -A-Aj, -A+Aj, -A-Aj, A+Aj, -A-Aj, A+Aj, A+Aj, -A-Aj |
| 6 | Polarization 1 | -A-Aj, A+Aj, -A-Aj, A+Aj, -A+Aj, -A-Aj, A+Aj, -A-Aj, -A+Aj, A+Aj, -A-Aj, A-Aj, A-Aj, A-Aj, A+Aj, A-Aj, A-Aj, A-Aj, -A+Aj, -A-Aj, A-Aj, A+Aj, A+Aj, A+Aj, A-Aj, -A+Aj, A+Aj, A+Aj, -A+Aj, A-Aj, A+Aj, A-Aj, -A-Aj, -A-Aj, -A+Aj, -A+Aj, -A-Aj, -A-Aj, A+Aj, -A+Aj, A-Aj, -A+Aj, -A-Aj, -A-Aj, -A+Aj, A+Aj, A-Aj, -A-Aj, A-Aj, A+Aj, -A+Aj, -A+Aj, A-Aj, -A-Aj, -A+Aj, -A-Aj, -A+Aj, -A-Aj, A+Aj, A-Aj, A+Aj, A+Aj, -A+Aj, -A-Aj, -A+Aj, A-Aj, -A+Aj, A-Aj, A-Aj, -A+Aj |
| | Polarization 2 | A-Aj, -A+Aj, A-Aj, -A+Aj, A+Aj, A-Aj, -A+Aj, A-Aj, A+Aj, -A+Aj, A-Aj, -A-Aj, -A-Aj, -A-Aj, -A+Aj, - A-Aj, -A-Aj, -A-Aj, A+Aj, A-Aj, -A-Aj, -A+Aj, -A+Aj, -A+Aj, -A-Aj, A+Aj, -A+Aj, -A+Aj, A+Aj, -A-Aj, -A+Aj, -A-Aj, A-Aj, A-Aj, A+Aj, A+Aj, A-Aj, A-Aj, -A+Aj, A+Aj, -A-Aj, A+Aj, A-Aj, A-Aj, A+Aj, - A+Aj, -A-Aj, A-Aj, -A-Aj, -A+Aj, A+Aj, A+Aj, -A-Aj, A-Aj, A+Aj, A-Aj, A+Aj, A-Aj, -A+Aj, -A-Aj, - A+Aj, -A+Aj, A+Aj, A-Aj, A+Aj, -A-Aj, A+Aj, -A-Aj, -A-Aj, A+Aj |
| 7 | Polarization 1 | A+Aj, -A-Aj, A+Aj, -A-Aj, A-Aj, A+Aj, -A-Aj, A+Aj, A-Aj, -A-Aj, A+Aj, -A+Aj, -A+Aj, -A+Aj, -A-Aj, - A+Aj, -A+Aj, -A+Aj, A-Aj, A+Aj, -A+Aj, -A-Aj, -A-Aj, -A-Aj, -A+Aj, A-Aj, -A-Aj, -A-Aj, A-Aj, -A+Aj, -A-Aj, -A+Aj, A+Aj, A+Aj, A-Aj, A-Aj, A+Aj, A+Aj, -A-Aj, A-Aj, -A+Aj, A-Aj, A+Aj, A+Aj, A-Aj, -A-Aj, -A+Aj, A+Aj, -A+Aj, -A-Aj, A-Aj, A-Aj, -A+Aj, A+Aj, A-Aj, A+Aj, A-Aj, A+Aj, -A-Aj, -A+Aj, -A-Aj, -A-Aj, A-Aj, A+Aj, A-Aj, -A+Aj, A-Aj, -A+Aj, -A+Aj, A-Aj |
| | Polarization 2 | -A+Aj, A-Aj, -A+Aj, A-Aj, -A-Aj, -A+Aj, A-Aj, -A+Aj, -A-Aj, A-Aj, -A+Aj, A+Aj, A+Aj, A+Aj, A-Aj, A+Aj, A+Aj, A+Aj, -A-Aj, -A+Aj, A+Aj, A-Aj, A-Aj, A-Aj, A+Aj, -A-Aj, A-Aj, A-Aj, -A-Aj, A+Aj, A-Aj, A+Aj, -A+Aj, -A+Aj, -A-Aj, -A-Aj, -A+Aj, -A+Aj, A-Aj, -A-Aj, A+Aj, -A-Aj, -A+Aj, -A+Aj, -A-Aj, A-Aj, A+Aj, -A+Aj, A+Aj, A-Aj, -A-Aj, -A-Aj, A+Aj, -A+Aj, -A-Aj, -A+Aj, -A-Aj, -A+Aj, A-Aj, A+Aj, A-Aj, A-Aj, -A-Aj, -A+Aj, -A-Aj, A+Aj, -A-Aj, A+Aj, A+Aj, -A-Aj |
| 8 | Polarization 1 | A+Aj, -A-Aj, A+Aj, -A-Aj, A-Aj, A+Aj, -A-Aj, A+Aj, A-Aj, -A-Aj, A+Aj, -A+Aj, -A+Aj, -A+Aj, -A-Aj, - A+Aj, -A+Aj, -A+Aj, A-Aj, A+Aj, -A+Aj, -A-Aj, -A-Aj, -A-Aj, -A+Aj, A-Aj, -A-Aj, -A-Aj, A-Aj, -A+Aj, -A-Aj, -A+Aj, A+Aj, A+Aj, A-Aj, A-Aj, A+Aj, A+Aj, -A-Aj, A-Aj, -A+Aj, A-Aj, A+Aj, A+Aj, A-Aj, -A-Aj, -A+Aj, A+Aj, -A+Aj, -A-Aj, A-Aj, A-Aj, -A+Aj, A+Aj, -A-Aj, -A-Aj, A-Aj, A-Aj, -A-Aj, -A+Aj, A-Aj, A+Aj, A-Aj, A+Aj, -A-Aj, -A+Aj, -A-Aj, -A-Aj, A-Aj, A+Aj, A-Aj, -A+Aj, A-Aj, -A+Aj, -A+Aj, A-Aj |
| | Polarization 2 | A-Aj, -A+Aj, A-Aj, -A+Aj, A+Aj, A-Aj, -A+Aj, A-Aj, A+Aj, -A+Aj, A-Aj, -A-Aj, -A-Aj, -A-Aj, -A+Aj, - A-Aj, -A-Aj, -A-Aj, A+Aj, A-Aj, -A-Aj, -A+Aj, -A+Aj, -A+Aj, -A-Aj, A+Aj, -A+Aj, -A+Aj, A+Aj, -A-Aj, -A+Aj, -A-Aj, A-Aj, A-Aj, A+Aj, A+Aj, A-Aj, A-Aj, -A+Aj, A+Aj, -A-Aj, A+Aj, A-Aj, A-Aj, A+Aj, - A+Aj, -A-Aj, A-Aj, -A-Aj, -A+Aj, A+Aj, A+Aj, -A-Aj, A-Aj, A+Aj, A-Aj, A+Aj, A-Aj, -A+Aj, -A-Aj, - A+Aj, -A+Aj, A+Aj, A-Aj, A+Aj, -A-Aj, A+Aj, -A-Aj, -A-Aj, A+Aj |

(continued)

| Index | Polarization | Pilot sequence |
|---|---|---|
| 9 | Polarization 1 | -A+Aj, -A-Aj, -A-Aj, A+Aj, A-Aj, A+Aj, A-Aj, -A-Aj, A-Aj, -A+Aj, A-Aj, -A+Aj, -A-Aj, A+Aj, -A+Aj, - A+Aj, -A+Aj, A-Aj, A-Aj, A+Aj, A+Aj, A+Aj, -A+Aj, A+Aj, A-Aj, -A-Aj, -A-Aj, A+Aj, -A-Aj, -A+Aj, - A-Aj, -A-Aj, A-Aj, A-Aj, -A+Aj, A-Aj, -A-Aj, A+Aj, A+Aj, -A+Aj, -A+Aj, -A-Aj, A-Aj, -A-Aj, A+Aj, A+Aj, A-Aj, A+Aj, -A-Aj, A-Aj, -A-Aj. -A+Aj, A-Aj, A-Aj, A+Aj, -A-Aj, -A+Aj, -A+Aj, A+Aj, A-Aj, A-Aj, -A+Aj, A+Aj, -A-Aj, -A+Aj, A+Aj, -A+Aj, -A-Aj, A-Aj, -A+Aj |
| | Polarization 2 | -A-Aj, A+Aj, A+Aj, A-Aj, -A-Aj, A-Aj. A-Aj, -A-Aj, -A+Aj, -A-Aj, A+Aj, A+Aj, -A-Aj, -A+Aj, A-Aj, A-Aj, -A-Aj, A-Aj, -A+Aj, -A+Aj, A+Aj, -A-Aj, A+Aj, -A+Aj, A+Aj, -A-Aj, A-Aj, A-Aj, A+Aj, -A-Aj, A-Aj, A+Aj, A+Aj, A-Aj, A-Aj, A+Aj, A-Aj, -A-Aj, -A+Aj, A+Aj, A-Aj, -A+Aj, -A-Aj, -A+Aj, -A-Aj, -A+Aj, - A+Aj, A-Aj, -A+Aj, A-Aj, -A+Aj, A+Aj, -A+Aj, -A+Aj, -A+Aj, -A+Aj, -A-Aj, A+Aj, A+Aj, A+Aj, A+Aj, A-Aj, A-Aj, -A-Aj, -A-Aj, -A-Aj, -A+Aj, A+Aj, -A-Aj, -A-Aj |
| 10 | Polarization 1 | -A+Aj, -A-Aj, -A-Aj, A+Aj, A-Aj, A+Aj, A-Aj, -A-Aj, A-Aj, -A+Aj, A-Aj, -A+Aj, -A-Aj, A+Aj, -A+Aj, - A+Aj, -A+Aj, A-Aj, A-Aj, A+Aj, A+Aj, A+Aj, -A+Aj, A+Aj, A-Aj, -A-Aj, -A-Aj, A+Aj, -A-Aj, -A+Aj, - A-Aj, -A-Aj, A-Aj, A-Aj, -A+Aj, A-Aj, -A-Aj, A+Aj, A+Aj, -A+Aj, -A+Aj, -A-Aj, A-Aj, -A-Aj, A+Aj, A+Aj, A-Aj, A+Aj, -A-Aj, A-Aj, -A-Aj. -A+Aj, A-Aj, A-Aj, A+Aj, -A-Aj, -A+Aj, -A+Aj, A+Aj, A-Aj, A-Aj, -A+Aj, A+Aj, -A-Aj, -A+Aj, A+Aj, -A+Aj, -A-Aj, A-Aj, -A+Aj |
| | Polarization 2 | A+Aj, A+Aj, A-Aj, -A-Aj, A-Aj, A-Aj, -A-Aj, -A+Aj, -A-Aj, A+Aj, A+Aj, -A-Aj, -A+Aj, A-Aj, A-Aj, -A-Aj, A-Aj, -A+Aj, -A+Aj, A+Aj, -A-Aj, A+Aj, -A+Aj, A+Aj, -A-Aj, A-Aj, A-Aj, A+Aj, -A-Aj, A-Aj, A+Aj, A+Aj, A-Aj, A-Aj, A+Aj, A-Aj, -A-Aj, -A+Aj, A+Aj, A-Aj, -A+Aj, -A-Aj, -A+Aj, -A-Aj, -A+Aj, -A-Aj, A-Aj, -A+Aj, A+Aj, -A+Aj, -A+Aj, -A+Aj, -A+Aj, -A-Aj, A+Aj, A+Aj, A+Aj, A+Aj, A-Aj, A-Aj, -A-Aj, -A-Aj, -A-Aj, -A+Aj, A+Aj, -A-Aj, -A-Aj, -A-Aj |
| 11 | Polarization 1 | A-Aj, -A+Aj, -A-Aj, A-Aj, A+Aj, A-Aj, -A-Aj, A+Aj, A-Aj, -A+Aj, -A+Aj, A+Aj, A-Aj, A-Aj, -A-Aj, A+Aj, -A+Aj, -A+Aj, A-Aj, -A-Aj, -A+Aj, -A-Aj, A+Aj, -A+Aj, A+Aj, A+Aj, -A-Aj, -A+Aj, -A-Aj, A-Aj, A-Aj, A+Aj, A+Aj, -A-Aj, -A+Aj, A-Aj, -A+Aj, -A+Aj, -A-Aj, -A-Aj, A-Aj, -A-Aj, A+Aj, -A-Aj, -A-Aj, - A+Aj, A+Aj, A-Aj, A+Aj, A+Aj, A+Aj. -A+Aj, -A+Aj, A-Aj, A-Aj, A-Aj, A+Aj, -A-Aj, A-Aj, -A+Aj, A-Aj, -A+Aj, -A-Aj, -A+Aj, A+Aj, -A+Aj, A+Aj, -A-Aj, -A-Aj, A-Aj |
| | Polarization 2 | -A-Aj, -A-Aj, -A-Aj, A+Aj, A-Aj, -A-Aj, -A-Aj, -A-Aj, -A+Aj, -A+Aj, A+Aj, A+Aj, A+Aj, A+Aj, -A-Aj, A-Aj, A-Aj, A-Aj, A-Aj, A+Aj, A-Aj, -A+Aj, A-Aj, -A+Aj, A-Aj, A-Aj, -A-Aj, A-Aj, -A-Aj, A-Aj, -A+Aj, A+Aj, A-Aj, -A-Aj, -A+Aj, A+Aj, -A+Aj, -A+Aj, A+Aj, A+Aj, -A+Aj, -A-Aj, A+Aj, -A+Aj, -A+Aj, -A-Aj, A+Aj, A-Aj, A+Aj, -A-Aj, A+Aj, A-Aj, A-Aj, -A+Aj, -A-Aj, -A+Aj, -A+Aj, A-Aj, -A-Aj, A+Aj, A+Aj, -A-Aj, A-Aj, -A-Aj, -A+Aj, -A+Aj, -A-Aj, -A+Aj, A+Aj, A+Aj |
| 12 | Polarization 1 | A-Aj, -A+Aj, -A-Aj, A-Aj, A+Aj, A-Aj, -A-Aj, A+Aj, A-Aj, -A+Aj, -A+Aj, A+Aj, A-Aj, A-Aj, -A-Aj, A+Aj, -A+Aj, -A+Aj, A-Aj, -A-Aj, -A+Aj, -A-Aj, A+Aj, -A+Aj, A+Aj, A+Aj, -A-Aj, -A+Aj, -A-Aj, A-Aj, A-Aj, A+Aj, A+Aj, -A-Aj, -A+Aj, A-Aj, -A+Aj, -A+Aj, -A-Aj, -A-Aj, A-Aj, -A-Aj, A+Aj, -A-Aj, -A-Aj, - A+Aj, A+Aj, A-Aj, A+Aj, A+Aj, A+Aj. -A+Aj, -A+Aj, A-Aj, A-Aj, A-Aj, A+Aj, -A-Aj, A-Aj, -A+Aj, A-Aj, -A+Aj, -A-Aj, -A+Aj, A+Aj, -A+Aj, A+Aj, -A-Aj, -A-Aj, A-Aj |
| | Polarization 2 | -A-Aj, -A-Aj, A+Aj, A-Aj, -A-Aj, -A-Aj, -A-Aj, -A+Aj, -A+Aj, A+Aj, A+Aj, A+Aj, A+Aj, -A-Aj, A-Aj, A-Aj, A-Aj, A-Aj, A+Aj, A-Aj, -A+Aj, A-Aj, -A+Aj, A-Aj, A-Aj, -A-Aj, A-Aj, -A-Aj, A-Aj, -A+Aj, A+Aj, A-Aj, -A-Aj, -A+Aj, A+Aj, -A+Aj, -A+Aj, A+Aj, A+Aj, -A+Aj, -A-Aj, A+Aj, -A+Aj, -A+Aj, -A-Aj, A+Aj, A-Aj, A+Aj, -A-Aj, A+Aj, -A-Aj, A-Aj, -A-Aj, -A+Aj, -A-Aj, -A+Aj, -A+Aj, A-Aj, -A-Aj, A+Aj, A+Aj, -A-Aj, A-Aj, -A-Aj, -A+Aj, -A+Aj, -A-Aj, -A+Aj, A+Aj, A+Aj, -A-Aj |

(11) When $N_{PS}$ = 78, the pilot sequence is one item in Table 18-1. Alternatively, any item is selected from Table 18-2 as a pilot sequence in one polarization, and any item is selected from Table 18-3 as a pilot sequence in the other polarization. Alternatively, any item is selected from Table 18-4 as a pilot sequence in one polarization, and any item is selected from Table 18-5 as a pilot sequence in the other polarization.

Table **18-1**

| Index | Polarization | Pilot sequence |
|---|---|---|
| 1 | Polarization 1 | -A+Aj, A-Aj, -A-Aj, A-Aj, -A-Aj, A-Aj, A+Aj, A-Aj, A+Aj, -A-Aj, A-Aj, -A-Aj, -A+Aj, A+Aj, A-Aj, -A+Aj, -A+Aj, A-Aj, A+Aj, A-Aj, -A-Aj, -A-Aj, A-Aj, A-Aj, -A-Aj, A+Aj, -A+Aj, A-Aj, A-Aj, -A-Aj, -A-Aj, -A+Aj, A-Aj, -A-Aj, -A+Aj, -A-Aj, A-Aj, -A+Aj, A+Aj, A+Aj, A+Aj, -A+Aj, A+Aj, A+Aj, -A-Aj, -A+Aj, A+Aj, -A+Aj, -A+Aj, -A+Aj, -A-Aj, A-Aj, A-Aj, A+Aj, A+Aj, -A+Aj, -A-Aj, A+Aj, -A-Aj, A+Aj, A-Aj, -A+Aj, A-Aj, A-Aj, A+Aj, -A-Aj, -A+Aj, -A-Aj, -A+Aj, -A+Aj, A+Aj, - A+Aj, A-Aj, -A+Aj, -A-Aj, -A-Aj, A+Aj, A+Aj |
| | Polarization 2 | -A-Aj, A+Aj, -A+Aj, A+Aj, -A+Aj, A+Aj, A-Aj, A+Aj, A-Aj, -A+Aj, A+Aj, -A+Aj, -A-Aj, A-Aj, A+Aj, -A-Aj, -A-Aj, A+Aj, A-Aj, A+Aj, -A+Aj, -A+Aj, A+Aj, A+Aj, -A+Aj, A-Aj, -A-Aj, A+Aj, A+Aj, -A+Aj, -A+Aj, -A-Aj, A+Aj, -A+Aj, -A-Aj, -A+Aj, A+Aj, -A-Aj, A-Aj, A-Aj, A-Aj, -A-Aj, A-Aj, A-Aj, -A+Aj, -A-Aj, A-Aj, -A-Aj, -A-Aj, -A-Aj, -A+Aj, A+Aj, A+Aj, A-Aj, A-Aj, -A-Aj, -A+Aj, A-Aj, -A+Aj, A-Aj, A+Aj, -A-Aj, A+Aj, A+Aj, A-Aj, -A+Aj, -A-Aj, -A+Aj, -A-Aj, -A-Aj, A-Aj, -A-Aj, A+Aj, -A-Aj, -A+Aj, -A+Aj, A-Aj, A-Aj |
| 2 | Polarization 1 | -A+Aj, A-Aj, -A-Aj, A-Aj, -A-Aj, A-Aj, A+Aj, A-Aj, A+Aj, -A-Aj, A-Aj, -A-Aj, -A+Aj, A+Aj, A-Aj, -A+Aj, -A+Aj, A-Aj, A+Aj, A-Aj, -A-Aj, -A-Aj, A-Aj, A-Aj, -A-Aj, A+Aj, -A+Aj, A-Aj, A-Aj, -A-Aj, -A-Aj, -A+Aj, A-Aj, -A-Aj, -A+Aj, -A-Aj, A-Aj, -A+Aj, A+Aj, A+Aj, A+Aj, -A+Aj, A+Aj, A+Aj, -A-Aj, -A+Aj, A+Aj, -A+Aj, -A+Aj, -A+Aj, -A-Aj, A-Aj, A-Aj, A+Aj, A+Aj, -A+Aj, -A-Aj, A+Aj, -A-Aj, A+Aj, A-Aj, -A+Aj, A-Aj, A-Aj, A+Aj, -A-Aj, -A+Aj, -A-Aj, -A+Aj, -A+Aj, A+Aj, - A+Aj, A-Aj, -A+Aj, -A-Aj, -A-Aj, A+Aj, A+Aj |
| | Polarization 2 | A+Aj, -A-Aj, A-Aj, -A-Aj, A-Aj, -A-Aj, -A+Aj, -A-Aj, -A+Aj, A-Aj, -A-Aj, A-Aj, A+Aj, -A+Aj, -A-Aj, A+Aj, A+Aj, -A-Aj, -A+Aj, -A-Aj, A-Aj, A-Aj, -A-Aj, -A-Aj, A-Aj, -A+Aj, A+Aj, -A-Aj, -A-Aj, A-Aj, A-Aj, A+Aj, -A-Aj, A-Aj, A+Aj, A-Aj, -A-Aj, A+Aj, -A+Aj, -A+Aj, -A+Aj, A+Aj, -A+Aj, -A+Aj, A-Aj, A+Aj, -A+Aj, A+Aj, A+Aj, A+Aj, A-Aj, -A-Aj, -A-Aj, -A+Aj, -A+Aj, A+Aj, A-Aj, -A+Aj, A-Aj, -A+Aj, -A-Aj, A+Aj, -A-Aj, -A-Aj, -A+Aj, A-Aj, A+Aj, A-Aj, A+Aj, A+Aj, -A+Aj, A+Aj, -A-Aj, A+Aj, A-Aj, A-Aj, -A+Aj, -A+Aj |
| 3 | Polarization 1 | A-Aj, -A+Aj, A+Aj, -A+Aj, A+Aj, -A+Aj, -A-Aj, -A+Aj, -A-Aj, A+Aj, -A+Aj, A+Aj, A-Aj, -A-Aj, -A+Aj, A-Aj, A-Aj, -A+Aj, -A-Aj, -A+Aj, A+Aj, A+Aj, -A+Aj, -A+Aj, A+Aj, -A-Aj, A-Aj, -A+Aj, -A+Aj, A+Aj, A+Aj, A-Aj, -A+Aj, A+Aj, A-Aj, A+Aj, -A+Aj, A-Aj, -A-Aj, -A-Aj, -A-Aj, A-Aj, -A-Aj, -A-Aj, A+Aj, A-Aj, -A-Aj, A-Aj, A-Aj, A-Aj, A+Aj, -A+Aj, -A+Aj, -A-Aj, -A-Aj, A-Aj, A+Aj, - A-Aj, A+Aj, -A-Aj, -A+Aj, A-Aj, -A+Aj, -A+Aj, -A-Aj, A+Aj, A-Aj, A+Aj, A-Aj, A-Aj, -A-Aj, A-Aj, -A+Aj, A-Aj, A+Aj, A+Aj, -A-Aj, -A-Aj |
| | Polarization 2 | A+Aj, -A-Aj, A-Aj, -A-Aj, A-Aj, -A-Aj, -A+Aj, -A-Aj, -A+Aj, A-Aj, -A-Aj, A-Aj, A+Aj, -A+Aj, -A-Aj, A+Aj, A+Aj, -A-Aj, -A+Aj, -A-Aj, A-Aj, A-Aj, -A-Aj, -A-Aj, A-Aj, -A+Aj, A+Aj, -A-Aj, -A-Aj, A-Aj, A-Aj, A+Aj, -A-Aj, A-Aj, A+Aj, A-Aj, -A-Aj, A+Aj, -A+Aj, -A+Aj, -A+Aj, A+Aj, -A+Aj, - A+Aj, A-Aj, A+Aj, -A+Aj, A+Aj, A+Aj, A+Aj, A-Aj, -A-Aj, -A-Aj, -A+Aj, -A+Aj, A+Aj, A-Aj, - A+Aj, A-Aj, -A+Aj, -A-Aj, A+Aj, -A-Aj, -A-Aj, -A+Aj, A-Aj, A+Aj, A-Aj, A+Aj, A+Aj, -A+Aj, A+Aj, -A-Aj, A+Aj, A-Aj, A-Aj, -A+Aj, -A+Aj |
| 4 | Polarization 1 | A-Aj, -A+Aj, A+Aj, -A+Aj, A+Aj, -A+Aj, -A-Aj, -A+Aj, -A-Aj, A+Aj, -A+Aj, A+Aj, A-Aj, -A-Aj, - A+Aj, A-Aj, A-Aj, -A+Aj, -A-Aj, -A+Aj, A+Aj, A+Aj, -A+Aj, -A+Aj, A+Aj, -A-Aj, A-Aj, -A+Aj, - A+Aj, A+Aj, A+Aj, A-Aj, -A+Aj, A+Aj, A-Aj, A+Aj, -A+Aj, A-Aj, -A-Aj, -A-Aj, -A-Aj, A-Aj, -A-Aj, -A-Aj, A+Aj, A-Aj, -A-Aj, A-Aj, A-Aj, A-Aj, A+Aj, -A+Aj, -A+Aj, -A-Aj, -A-Aj, A-Aj, A+Aj, - A-Aj, A+Aj, -A-Aj, -A+Aj, A-Aj, -A+Aj, -A+Aj, -A-Aj, A+Aj, A-Aj, A+Aj, A-Aj, A-Aj, -A-Aj, A-Aj, -A+Aj, A-Aj, A+Aj, A+Aj, -A-Aj, -A-Aj |
| | Polarization 2 | -A-Aj, A+Aj, -A+Aj, A+Aj, -A+Aj, A+Aj, A-Aj, A+Aj, A-Aj, -A+Aj, A+Aj, -A+Aj, -A-Aj, A-Aj, A+Aj, -A-Aj, -A-Aj, A+Aj, A-Aj, A+Aj, -A+Aj, -A+Aj, A+Aj, A+Aj, -A+Aj, A-Aj, -A-Aj, A+Aj, A+Aj, -A+Aj, -A+Aj, -A-Aj, A+Aj, -A+Aj, -A-Aj, -A+Aj, A+Aj, -A-Aj, A-Aj, A-Aj, A-Aj, -A-Aj, A-Aj, A-Aj, -A+Aj, A-Aj, A-Aj, -A-Aj, -A-Aj, -A-Aj, -A+Aj, A+Aj, A+Aj, A-Aj, A-Aj, -A-Aj, -A+Aj, A-Aj, -A+Aj, A-Aj, A+Aj, -A-Aj, A+Aj, A+Aj, A-Aj, -A+Aj, -A-Aj, -A+Aj, -A-Aj, -A-Aj, A-Aj, -A-Aj, A+Aj, -A-Aj, -A+Aj, -A+Aj, A-Aj, A-Aj |

(continued)

| Index | Polarization | Pilot sequence |
|---|---|---|
| 5 | Polarization 1 | -A-Aj, A-Aj, A-Aj, A+Aj, A-Aj, -A+Aj, A-Aj, A-Aj, -A-Aj, A-Aj, -A+Aj, A+Aj, A-Aj, -A-Aj, A-Aj, A-Aj, -A-Aj, -A+Aj, A-Aj, -A-Aj, -A-Aj, A-Aj, -A-Aj, -A-Aj, -A+Aj, A+Aj, A+Aj, A+Aj, -A+Aj, -A+Aj, -A+Aj, -A-Aj, A+Aj, -A-Aj, A+Aj, A-Aj, A+Aj, A-Aj, A-Aj, -A+Aj, -A+Aj, A-Aj, -A-Aj, A+Aj, -A+Aj, A+Aj, A-Aj, A+Aj, -A+Aj, -A+Aj, A-Aj, A+Aj, -A-Aj, A-Aj, -A+Aj, -A-Aj, -A+Aj, A+Aj, -A-Aj, -A-Aj, A-Aj, A+Aj, A+Aj, A-Aj, -A+Aj, -A+Aj, -A+Aj, A+Aj, -A-Aj, A+Aj, -A+Aj, -A-Aj, -A+Aj, -A-Aj, A+Aj, A+Aj, -A-Aj, -A+Aj |
| | Polarization 2 | -A+Aj, A+Aj, A+Aj, A-Aj, A+Aj, -A-Aj, A+Aj, A+Aj, -A+Aj, A+Aj, -A-Aj, A-Aj, A+Aj, -A+Aj, A+Aj, A+Aj, -A+Aj, -A-Aj, A+Aj, -A+Aj, -A+Aj, A+Aj, -A+Aj, -A+Aj, -A-Aj, A-Aj, A-Aj, A-Aj, -A-Aj, -A-Aj, -A-Aj, -A+Aj, A-Aj, -A+Aj, A-Aj, A+Aj, A-Aj, A+Aj, A+Aj, -A-Aj, -A-Aj, A+Aj, -A+Aj, A-Aj, -A-Aj, A-Aj, A+Aj, A-Aj, -A-Aj, -A-Aj, A+Aj, A-Aj, -A+Aj, A+Aj, -A-Aj, -A+Aj, -A-Aj, -A-Aj, -A+Aj, -A+Aj, A+Aj, A-Aj, A-Aj, A+Aj, -A-Aj, -A-Aj, -A-Aj, A-Aj, -A+Aj, A-Aj, -A-Aj, -A+Aj, -A-Aj, -A+Aj, A-Aj, A-Aj, -A+Aj, -A-Aj |
| 6 | Polarization 1 | -A-Aj, A-Aj, A-Aj, A+Aj, A-Aj, -A+Aj, A-Aj, A-Aj, -A-Aj, A-Aj, -A+Aj, A+Aj, A-Aj, -A-Aj, A-Aj, A-Aj, -A-Aj, -A+Aj, A-Aj, -A-Aj, -A-Aj, A-Aj, -A-Aj, -A-Aj, -A+Aj, A+Aj, A+Aj, A+Aj, -A+Aj, -A+Aj, -A+Aj, -A-Aj, A+Aj, -A-Aj, A+Aj, A-Aj, A+Aj, A-Aj, A-Aj, -A+Aj, -A+Aj, A-Aj, -A-Aj, A+Aj, -A+Aj, A+Aj, A-Aj, A+Aj, -A+Aj, -A+Aj, A-Aj, A+Aj, -A-Aj, A-Aj, -A+Aj, -A-Aj, -A+Aj, A+Aj, -A-Aj, -A-Aj, A-Aj, A+Aj, A+Aj, A-Aj, -A+Aj, -A+Aj, -A+Aj, A+Aj, -A-Aj, A+Aj, -A+Aj, -A-Aj, -A+Aj, -A-Aj, A+Aj, A+Aj, -A-Aj, -A+Aj |
| | Polarization 2 | A-Aj, -A-Aj, -A-Aj, -A+Aj, -A-Aj, A+Aj, -A-Aj, -A-Aj, A-Aj, -A-Aj, A+Aj, -A+Aj, -A-Aj, A-Aj, -A-Aj, -A-Aj, A-Aj, A+Aj, -A-Aj, A-Aj, A-Aj, -A-Aj, A-Aj, A-Aj, A+Aj, -A+Aj, -A+Aj, -A+Aj, A+Aj, A+Aj, A+Aj, A-Aj, -A+Aj, A-Aj, -A+Aj, -A-Aj, -A+Aj, -A-Aj, -A-Aj, A+Aj, A+Aj, -A-Aj, A-Aj, -A+Aj, A+Aj, -A+Aj, -A-Aj, -A+Aj, A+Aj, A+Aj, -A-Aj, -A+Aj, A-Aj, -A-Aj, A+Aj, A-Aj, A+Aj, -A+Aj, A-Aj, A-Aj, -A-Aj, -A+Aj, -A+Aj, -A-Aj, A+Aj, A+Aj, A+Aj, -A+Aj, A-Aj, -A+Aj, A+Aj, A-Aj, A+Aj, A-Aj, -A+Aj, -A+Aj, A-Aj, A+Aj |
| 7 | Polarization 1 | A+Aj, -A+Aj, -A+Aj, -A-Aj, -A+Aj, A-Aj, -A+Aj, -A+Aj, A+Aj, -A+Aj, A-Aj, -A-Aj, -A+Aj, A+Aj, -A+Aj, -A+Aj, A+Aj, A-Aj, -A+Aj, A+Aj, A+Aj, -A+Aj, A+Aj, A+Aj, A-Aj, -A-Aj, -A-Aj, -A-Aj, A-Aj, A-Aj, A-Aj, A+Aj, -A-Aj, A+Aj, -A-Aj, -A+Aj, -A-Aj, -A+Aj, -A+Aj, A-Aj, A-Aj, -A+Aj, A+Aj, -A-Aj, A-Aj, -A-Aj, -A+Aj, -A-Aj, A-Aj, A-Aj, -A+Aj, -A-Aj, A+Aj, -A+Aj, A-Aj, A+Aj, A-Aj, -A-Aj, A+Aj, A+Aj, -A+Aj, -A-Aj, -A-Aj, -A+Aj, A-Aj, A-Aj, A-Aj, -A-Aj, A+Aj, -A-Aj, A-Aj, A+Aj, A-Aj, A+Aj, -A-Aj, -A-Aj, A+Aj, A-Aj |
| | Polarization 2 | -A+Aj, A+Aj, A+Aj, A-Aj, A+Aj, -A-Aj, A+Aj, A+Aj, -A+Aj, A+Aj, -A-Aj, A-Aj, A+Aj, -A+Aj, A+Aj, A+Aj, -A+Aj, -A-Aj, A+Aj, -A+Aj, -A+Aj, A+Aj, -A+Aj, -A+Aj, -A-Aj, A-Aj, A-Aj, A-Aj, -A-Aj, -A-Aj, -A-Aj, -A+Aj, A-Aj, -A+Aj, A-Aj, A+Aj, A-Aj, A+Aj, A+Aj, -A-Aj, -A-Aj, A+Aj, -A+Aj, A-Aj, -A-Aj, A-Aj, A+Aj, A-Aj, -A-Aj, -A-Aj, A+Aj, A-Aj, -A+Aj, A+Aj, -A-Aj, -A+Aj, -A-Aj, A-Aj, -A+Aj, -A+Aj, A+Aj, A-Aj, A-Aj, A+Aj, -A-Aj, -A-Aj, -A-Aj, A-Aj, -A+Aj, A-Aj, -A-Aj, -A+Aj, -A-Aj |
| 8 | Polarization 1 | A+Aj, -A+Aj, -A+Aj, -A-Aj, -A+Aj, A-Aj, -A+Aj, -A+Aj, A+Aj, -A+Aj, A-Aj, -A-Aj, -A+Aj, A+Aj, -A+Aj, -A+Aj, A+Aj, A-Aj, -A+Aj, A+Aj, A+Aj, -A+Aj, A+Aj, A+Aj, A-Aj, -A-Aj, -A-Aj, -A-Aj, A-Aj, A-Aj, A-Aj, A+Aj, -A-Aj, A+Aj, -A-Aj, -A+Aj, -A-Aj, -A+Aj, -A+Aj, A-Aj, A-Aj, -A+Aj, A+Aj, -A-Aj, A-Aj, -A-Aj, -A+Aj, -A-Aj, A-Aj, A-Aj, -A+Aj, -A-Aj, A+Aj, -A-Aj, A+Aj, A-Aj, -A+Aj, -A-Aj, -A-Aj, A+Aj, A-Aj, A-Aj, A-Aj, -A-Aj, A+Aj, -A-Aj, A-Aj, A+Aj, A-Aj, A+Aj, -A-Aj, -A-Aj, A+Aj, A-Aj |
| | Polarization 2 | A-Aj, -A-Aj, -A-Aj, -A+Aj, -A-Aj, A+Aj, -A-Aj, -A-Aj, A-Aj, -A-Aj, A+Aj, -A+Aj, -A-Aj, A-Aj, -A-Aj, -A-Aj, A-Aj, A+Aj, -A-Aj, A-Aj, A-Aj, -A-Aj, A-Aj, A-Aj, A+Aj, -A+Aj, -A+Aj, -A+Aj, A+Aj, A+Aj, A+Aj, A-Aj, -A+Aj, A-Aj, -A+Aj, -A-Aj, -A+Aj, -A-Aj, -A-Aj, A+Aj, A+Aj, -A-Aj, A-Aj, -A+Aj, A+Aj, -A+Aj, -A-Aj, -A+Aj, A+Aj, A+Aj, -A-Aj, -A+Aj, A-Aj, -A-Aj, A+Aj, A-Aj, A+Aj, -A+Aj, A-Aj, A-Aj, -A-Aj, -A+Aj, -A+Aj, -A-Aj, A+Aj, A+Aj, A+Aj, -A+Aj, A-Aj, -A+Aj, A+Aj, A-Aj, A+Aj, A-Aj, -A+Aj, -A+Aj, A-Aj, A+Aj |

(continued)

| Index | Polarization | Pilot sequence |
|---|---|---|
| 9 | Polarization 1 | -A+Aj, A+Aj, A+Aj, A-Aj, -A+Aj, A-Aj, -A+Aj, -A+Aj, -A-Aj, A+Aj, A-Aj, -A-Aj, -A-Aj, A-Aj, -A-Aj, -A+Aj, -A-Aj, A+Aj, -A-Aj, -A+Aj, -A-Aj, -A+Aj, -A+Aj, -A+Aj, A+Aj, -A-Aj, -A+Aj, A-Aj, - A-Aj, -A+Aj, A-Aj, A-Aj, -A-Aj, A-Aj, -A+Aj, -A+Aj, A-Aj, A-Aj, A-Aj, A+Aj, -A+Aj, A-Aj, A+Aj, A-Aj, -A+Aj, -A-Aj, -A-Aj, -A+Aj, A+Aj, A-Aj, A-Aj, A+Aj, A+Aj, A+Aj, A+Aj, -A+Aj, -A-Aj, -A-Aj, A+Aj, A-Aj, A-Aj, -A+Aj, A-Aj, A+Aj, -A-Aj, -A-Aj, -A-Aj, A+Aj, -A-Aj, A+Aj, -A+Aj, -A+Aj, A-Aj, -A-Aj, A+Aj, A+Aj, A-Aj, A+Aj |
| | Polarization 2 | -A-Aj, A-Aj, A-Aj, A+Aj, -A-Aj, A+Aj, -A-Aj, -A-Aj, -A+Aj, A-Aj, A+Aj, -A+Aj, -A+Aj, A+Aj, -A+Aj, -A-Aj, -A+Aj, A-Aj, -A+Aj, -A-Aj, -A+Aj, -A-Aj, -A-Aj, -A-Aj, A-Aj, -A+Aj, -A-Aj, A+Aj, -A+Aj, -A-Aj, A+Aj, A+Aj, -A+Aj, A+Aj, -A-Aj, -A-Aj, A+Aj, A+Aj, A+Aj, A-Aj, -A-Aj, A+Aj, A-Aj, A+Aj, -A-Aj, -A+Aj, -A+Aj, -A-Aj, A-Aj, A+Aj, A+Aj, A-Aj, A-Aj, A-Aj, A-Aj, -A-Aj, -A+Aj, -A+Aj, A-Aj, A+Aj, A+Aj, -A-Aj, A+Aj, A-Aj, -A+Aj, -A+Aj, -A+Aj, A-Aj, -A+Aj, A-Aj, -A-Aj, -A-Aj, A+Aj, -A+Aj, A-Aj, A-Aj, A+Aj, A-Aj |
| 10 | Polarization 1 | -A+Aj, A+Aj, A+Aj, A-Aj, -A+Aj, A-Aj, -A+Aj, -A+Aj, -A-Aj, A+Aj, A-Aj, -A-Aj, -A-Aj, A-Aj, -A-Aj, -A+Aj, -A-Aj, A+Aj, -A-Aj, -A+Aj, -A-Aj, -A+Aj, -A+Aj, -A+Aj, A+Aj, -A-Aj, -A+Aj, A-Aj, - A-Aj, -A+Aj, A-Aj, A-Aj, -A-Aj, A-Aj, -A+Aj, -A+Aj, A-Aj, A-Aj, A-Aj, A+Aj, -A+Aj, A-Aj, A+Aj, A-Aj, -A+Aj, -A-Aj, -A-Aj, -A+Aj, A+Aj, A-Aj, A-Aj, A+Aj, A+Aj, A+Aj, A+Aj, -A+Aj, -A-Aj, -A-Aj, A+Aj, A-Aj, A-Aj, -A+Aj, A-Aj, A+Aj, -A-Aj, -A-Aj, -A-Aj, A+Aj, -A-Aj, A+Aj, -A+Aj, -A+Aj, A-Aj, -A-Aj, A+Aj, A+Aj, A-Aj, A+Aj |
| | Polarization 2 | A+Aj, -A+Aj, -A+Aj, -A-Aj, A+Aj, -A-Aj, A+Aj, A+Aj, A-Aj, -A+Aj, -A-Aj, A-Aj, A-Aj, -A-Aj, A-Aj, A+Aj, A-Aj, -A+Aj, A-Aj, A+Aj, A-Aj, A+Aj, A+Aj, A+Aj, -A+Aj, A-Aj, A+Aj, -A-Aj, A-Aj, A+Aj, -A-Aj, -A-Aj, A-Aj, -A-Aj, A+Aj, A+Aj, -A-Aj, -A-Aj, -A-Aj, -A+Aj, A+Aj, -A-Aj, -A+Aj, - A-Aj, A+Aj, A-Aj, A-Aj, A+Aj, -A+Aj, -A-Aj, -A-Aj, -A+Aj, -A+Aj, -A+Aj, -A+Aj, A+Aj, A-Aj, A- Aj, -A+Aj, -A-Aj, -A-Aj, A+Aj, -A-Aj, -A+Aj, A-Aj, A-Aj, A-Aj, -A+Aj, A-Aj, -A+Aj, A+Aj, A+Aj, -A-Aj, A-Aj, -A+Aj, -A+Aj, -A-Aj, -A+Aj |
| 11 | Polarization 1 | A-Aj, -A-Aj, -A-Aj, -A+Aj, A-Aj, -A+Aj, A-Aj, A-Aj, A+Aj, -A-Aj, -A+Aj, A+Aj, A+Aj, -A+Aj, A+Aj, A-Aj, A+Aj, -A-Aj, A+Aj, A-Aj, A+Aj, A-Aj, A-Aj, A-Aj, -A-Aj, A+Aj, A-Aj, -A+Aj, A+Aj, A-Aj, -A+Aj, -A+Aj, A+Aj, -A+Aj, A-Aj, A-Aj, -A+Aj, -A+Aj, -A+Aj, -A-Aj, A-Aj, -A+Aj, -A-Aj, - A+Aj, A-Aj, A+Aj, A+Aj, A-Aj, -A-Aj, -A+Aj, -A+Aj, -A-Aj, -A-Aj, -A-Aj, -A-Aj, A-Aj, A+Aj, A+Aj, -A-Aj, -A+Aj, -A+Aj, A-Aj, -A+Aj, -A-Aj, A+Aj, A+Aj, A+Aj, -A-Aj, A+Aj, -A-Aj, A-Aj, A-Aj, -A+Aj, A+Aj, -A-Aj, -A-Aj, -A+Aj, -A-Aj |
| | Polarization 2 | -A-Aj, A-Aj, A-Aj, A+Aj, -A-Aj, A+Aj, -A-Aj, -A-Aj, -A+Aj, A-Aj, A+Aj, -A+Aj, -A+Aj, A+Aj, - A+Aj, -A-Aj, -A+Aj, A-Aj, -A+Aj, -A-Aj, -A+Aj, -A-Aj, -A-Aj, -A-Aj, A-Aj, -A+Aj, -A-Aj, A+Aj, - A+Aj, -A-Aj, A+Aj, A+Aj, -A+Aj, A+Aj, -A-Aj, -A-Aj, A+Aj, A+Aj, A+Aj, A-Aj, -A-Aj, A+Aj, A- Aj, A+Aj, -A-Aj, -A+Aj, -A+Aj, -A-Aj, A-Aj, A+Aj, A+Aj, A-Aj, A-Aj, A-Aj, A-Aj, -A-Aj, -A+Aj, - A+Aj, A-Aj, A+Aj, A+Aj, -A-Aj, A+Aj, A-Aj, -A+Aj, -A+Aj, -A+Aj, A-Aj, -A+Aj, A-Aj, -A-Aj, -A- Aj, A+Aj, -A+Aj, A-Aj, A-Aj, A+Aj, A-Aj |
| 12 | Polarization 1 | A-Aj, -A-Aj, -A-Aj, -A+Aj, A-Aj, -A+Aj, A-Aj, A-Aj, A+Aj, -A-Aj, -A+Aj, A+Aj, A+Aj, -A+Aj, A+Aj, A-Aj, A+Aj, -A-Aj, A+Aj, A-Aj, A+Aj, A-Aj, A-Aj, A-Aj, -A-Aj, A+Aj, A-Aj, -A+Aj, A+Aj, A-Aj, -A+Aj, -A+Aj, A+Aj, -A+Aj, A-Aj, A-Aj, -A+Aj, -A+Aj, -A+Aj, -A-Aj, A-Aj, -A+Aj, -A-Aj, - A+Aj, A-Aj, A+Aj, A+Aj, A-Aj, -A-Aj, -A+Aj, -A+Aj, -A-Aj, -A-Aj, -A-Aj, -A-Aj, A-Aj, A+Aj, A+Aj, -A-Aj, -A+Aj, -A+Aj, A-Aj, -A+Aj, -A-Aj, A+Aj, A+Aj, A+Aj, -A-Aj, A+Aj, -A-Aj, A-Aj, A- Aj, -A+Aj, A+Aj, -A-Aj, -A-Aj, -A+Aj, -A-Aj |
| | Polarization 2 | A+Aj, -A+Aj, -A+Aj, -A-Aj, A+Aj, -A-Aj, A+Aj, A+Aj, A-Aj, -A+Aj, -A-Aj, A-Aj, A-Aj, -A-Aj, A- Aj, A+Aj, A-Aj, -A+Aj, A-Aj, A+Aj, A-Aj, A+Aj, A+Aj, A+Aj, -A+Aj, A-Aj, A+Aj, -A-Aj, A-Aj, A+Aj, -A-Aj, -A-Aj, A-Aj, -A-Aj, A+Aj, A+Aj, -A-Aj, -A-Aj, -A-Aj, -A+Aj, A+Aj, -A-Aj, -A+Aj, - A-Aj, A+Aj, A-Aj, A-Aj, A+Aj, -A+Aj, -A-Aj, -A-Aj, -A+Aj, -A+Aj, -A+Aj, -A+Aj, A+Aj, A-Aj, A- Aj, -A+Aj, -A-Aj, -A-Aj, A+Aj, -A-Aj, -A+Aj, A-Aj, A-Aj, A-Aj, -A+Aj, A-Aj, -A+Aj, A+Aj, A+Aj, -A-Aj, A-Aj, -A+Aj, -A+Aj, -A-Aj, -A+Aj |

(continued)

| Index | Polarization | Pilot sequence |
|---|---|---|
| 13 | Polarization 1 | -A-Aj, A-Aj, -A-Aj, -A-Aj, A+Aj, A-Aj, -A+Aj, -A+Aj, -A-Aj, A+Aj, -A-Aj, A+Aj, A+Aj, A+Aj, -A-Aj, A-Aj, -A+Aj, A-Aj, A-Aj, -A-Aj, A+Aj, A+Aj, -A+Aj, -A-Aj, -A-Aj, -A-Aj, -A-Aj, A-Aj, A-Aj, -A-Aj, -A+Aj, A+Aj, A+Aj, -A+Aj, A-Aj, -A-Aj, A-Aj, -A+Aj, -A-Aj, A-Aj, A-Aj, A-Aj, -A+Aj, -A+Aj, A-Aj, A+Aj, A-Aj, A-Aj, -A+Aj, A+Aj, A-Aj, -A+Aj, A+Aj, -A-Aj, -A+Aj, -A+Aj, -A+Aj, A+Aj, -A+Aj, A+Aj, -A-Aj, A+Aj, -A+Aj, A+Aj, A-Aj, A+Aj, A+Aj, A-Aj, -A-Aj, A+Aj, -A+Aj, -A+Aj, A-Aj, -A+Aj, A-Aj, -A-Aj, -A-Aj, -A+Aj |
| | Polarization 2 | -A+Aj, A+Aj, -A+Aj, -A+Aj, A-Aj, A+Aj, -A-Aj, -A-Aj, -A+Aj, A-Aj, -A+Aj, A-Aj, A-Aj, A-Aj, -A+Aj, A+Aj, -A-Aj, A+Aj, A+Aj, -A+Aj, A-Aj, A-Aj, -A-Aj, -A+Aj, -A+Aj, -A+Aj, -A+Aj, A+Aj, A+Aj, -A+Aj, -A-Aj, A-Aj, A-Aj, -A-Aj, A+Aj, -A+Aj, A+Aj, -A-Aj, -A+Aj, A+Aj, A+Aj, A+Aj, -A-Aj, -A-Aj, A+Aj, A-Aj, A+Aj, A+Aj, -A-Aj, A-Aj, A+Aj, -A-Aj, A-Aj, -A+Aj, -A-Aj, -A-Aj, A-Aj, -A-Aj, A-Aj, -A+Aj, A-Aj, -A-Aj, A-Aj, A+Aj, A-Aj, A-Aj, A+Aj, -A+Aj, A-Aj, -A-Aj, -A-Aj, A+Aj, -A-Aj, A+Aj, -A+Aj, -A+Aj, -A-Aj |
| 14 | Polarization 1 | -A-Aj, A-Aj, -A-Aj, -A-Aj, A+Aj, A-Aj, -A+Aj, -A+Aj, -A-Aj, A+Aj, -A-Aj, A+Aj, A+Aj, A+Aj, -A-Aj, A-Aj, -A+Aj, A-Aj, A-Aj, -A-Aj, A+Aj, A+Aj, -A+Aj, -A-Aj, -A-Aj, -A-Aj, -A-Aj, A-Aj, A-Aj, -A-Aj, -A+Aj, A+Aj, A+Aj, -A+Aj, A-Aj, -A-Aj, A-Aj, -A+Aj, -A-Aj, A-Aj, A-Aj, A-Aj, -A+Aj, -A+Aj, A-Aj, A+Aj, A-Aj, A-Aj, -A+Aj, A+Aj, A-Aj, -A+Aj, A+Aj, -A-Aj, -A+Aj, -A+Aj, -A+Aj, A+Aj, -A+Aj, A+Aj, -A-Aj, A+Aj, -A+Aj, A+Aj, A-Aj, A+Aj, A+Aj, A-Aj, -A-Aj, A+Aj, -A+Aj, -A+Aj, A-Aj, -A+Aj, A-Aj, -A-Aj, -A-Aj, -A+Aj |
| | Polarization 2 | A-Aj, -A-Aj, A-Aj, A-Aj, -A+Aj, -A-Aj, A+Aj, A+Aj, A-Aj, -A+Aj, A-Aj, -A+Aj, -A+Aj, -A+Aj, A-Aj, -A-Aj, A+Aj, -A-Aj, -A-Aj, A-Aj, -A+Aj, -A+Aj, A+Aj, A-Aj, A-Aj, A-Aj, A-Aj, -A-Aj, -A-Aj, A-Aj, A+Aj, -A+Aj, -A+Aj, A+Aj, -A-Aj, A-Aj, -A-Aj, A+Aj, A-Aj, -A-Aj, -A-Aj, -A-Aj, A+Aj, A+Aj, -A-Aj, -A+Aj, -A-Aj, -A-Aj, A+Aj, -A+Aj, -A-Aj, A+Aj, -A+Aj, A-Aj, A+Aj, A+Aj, A+Aj, - A+Aj, A+Aj, -A+Aj, A-Aj, -A+Aj, A+Aj, -A+Aj, -A-Aj, -A+Aj, -A+Aj, -A-Aj, A-Aj, -A+Aj, A+Aj, A+Aj, -A-Aj, A+Aj, -A-Aj, A-Aj, A-Aj, A+Aj |
| 15 | Polarization 1 | A+Aj, -A+Aj, A+Aj, A+Aj, -A-Aj, -A+Aj, A-Aj, A-Aj, A+Aj, -A-Aj, A+Aj, -A-Aj, -A-Aj, -A-Aj, A+Aj, -A+Aj, A-Aj, -A+Aj, -A+Aj, A+Aj, -A-Aj, -A-Aj, A-Aj, A+Aj, A+Aj, A+Aj, A+Aj, -A+Aj, -A+Aj, A+Aj, A-Aj, -A-Aj, -A-Aj, A-Aj, -A+Aj, A+Aj, -A+Aj, A-Aj, A+Aj, -A+Aj, -A+Aj, -A+Aj, A-Aj, A-Aj, -A+Aj, -A-Aj, -A+Aj, -A+Aj, A-Aj, -A-Aj, -A+Aj, A-Aj, -A-Aj, A+Aj, A-Aj, A-Aj, A-Aj, -A-Aj, A-Aj, -A-Aj, A+Aj, -A-Aj, A-Aj, -A-Aj, -A+Aj, -A-Aj, -A-Aj, -A+Aj, A+Aj, -A-Aj, A-Aj, A-Aj, -A+Aj, A-Aj, -A+Aj, A+Aj, A+Aj, A-Aj |
| | Polarization 2 | -A+Aj, A+Aj, -A+Aj, -A+Aj, A-Aj, A+Aj, -A-Aj, -A-Aj, -A+Aj, A-Aj, -A+Aj, A-Aj, A-Aj, A-Aj, -A+Aj, A+Aj, -A-Aj, A+Aj, A+Aj, -A+Aj, A-Aj, A-Aj, -A-Aj, -A+Aj, -A+Aj, -A+Aj, -A+Aj, A+Aj, A+Aj, -A+Aj, -A-Aj, A-Aj, A-Aj, -A-Aj, A+Aj, -A+Aj, A+Aj, -A-Aj, -A+Aj, A+Aj, A+Aj, A+Aj, -A-Aj, -A-Aj, A+Aj, A-Aj, A+Aj, A+Aj, -A-Aj, A-Aj, A+Aj, -A-Aj, A-Aj, -A+Aj, A-Aj, -A-Aj, A-Aj, A+Aj, A-Aj, A-Aj, A+Aj, -A+Aj, A-Aj, -A-Aj, -A-Aj, A+Aj, -A-Aj, A+Aj, -A+Aj, -A+Aj, -A-Aj |
| 16 | Polarization 1 | A+Aj, -A+Aj, A+Aj, A+Aj, -A-Aj, -A+Aj, A-Aj, A-Aj, A+Aj, -A-Aj, A+Aj, -A-Aj, -A-Aj, -A-Aj, A+Aj, -A+Aj, A-Aj, -A+Aj, -A+Aj, A+Aj, -A-Aj, -A-Aj, A-Aj, A+Aj, A+Aj, A+Aj, A+Aj, -A+Aj, -A+Aj, A+Aj, A-Aj, -A-Aj, -A-Aj, A-Aj, -A+Aj, A+Aj, -A+Aj, A-Aj, A+Aj, -A+Aj, -A+Aj, -A+Aj, A-Aj, A-Aj, -A+Aj, -A-Aj, -A+Aj, -A+Aj, A-Aj, -A-Aj, -A+Aj, A-Aj, -A-Aj, A+Aj, A-Aj, A-Aj, A-Aj, -A-Aj, A-Aj, -A-Aj, A+Aj, -A-Aj, A-Aj, -A-Aj, -A+Aj, -A-Aj, -A-Aj, -A+Aj, A+Aj, -A-Aj, A-Aj, A-Aj, -A+Aj, A-Aj, -A+Aj, A+Aj, A+Aj, A-Aj |
| | Polarization 2 | A-Aj, -A-Aj, A-Aj, A-Aj, -A+Aj, -A-Aj, A+Aj, A+Aj, A-Aj, -A+Aj, A-Aj, -A+Aj, -A+Aj, -A+Aj, A-Aj, -A-Aj, A+Aj, -A-Aj, -A-Aj, A-Aj, -A+Aj, -A+Aj, A+Aj, A-Aj, A-Aj, A-Aj, A-Aj, -A-Aj, -A-Aj, A-Aj, A+Aj, -A+Aj, -A+Aj, A+Aj, -A-Aj, A-Aj, -A-Aj, A+Aj, A-Aj, -A-Aj, -A-Aj, -A-Aj, A+Aj, A+Aj, -A-Aj, -A+Aj, -A-Aj, -A-Aj, A+Aj, -A+Aj, -A-Aj, A+Aj, -A+Aj, A-Aj, A+Aj, A+Aj, A+Aj, - A+Aj, A+Aj, -A+Aj, A-Aj, -A+Aj, A+Aj, -A+Aj, -A-Aj, -A+Aj, -A+Aj, -A-Aj, A-Aj, -A+Aj, A+Aj, A+Aj, -A-Aj, A+Aj, -A-Aj, A-Aj, A-Aj, A+Aj |

(continued)

| Index | Polarization | Pilot sequence |
|---|---|---|
| 17 | Polarization 1 | -A-Aj, -A-Aj, A+Aj, A+Aj, -A+Aj, A-Aj, -A+Aj, -A-Aj, -A+Aj, -A+Aj, A+Aj, -A+Aj, A+Aj, -A-Aj, A-Aj, A-Aj, -A+Aj, A-Aj, -A-Aj, A+Aj, -A-Aj, A+Aj, -A+Aj, -A-Aj, -A-Aj, A-Aj, A-Aj, A+Aj, -A+Aj, -A+Aj, -A+Aj, -A-Aj, -A+Aj, A+Aj, -A-Aj, -A-Aj, -A+Aj, -A-Aj, -A-Aj, -A-Aj, -A+Aj, A-Aj, A+Aj, -A+Aj, A+Aj, A-Aj, -A+Aj, A+Aj, A+Aj, A-Aj, A-Aj, -A+Aj, -A-Aj, A+Aj, A-Aj, A-Aj, A+Aj, A+Aj, A-Aj, -A-Aj, A-Aj, -A+Aj, -A+Aj, A-Aj, -A-Aj, -A+Aj, A+Aj, A-Aj, A+Aj, -A-Aj, A-Aj, -A-Aj, A-Aj, A+Aj, A-Aj, A+Aj, A-Aj, -A+Aj |
| | Polarization 2 | -A+Aj, -A+Aj, A-Aj, A-Aj, -A-Aj, A+Aj, -A-Aj, -A+Aj, -A-Aj, -A-Aj, A-Aj, -A-Aj, A-Aj, -A+Aj, A+Aj, A+Aj, -A-Aj, A+Aj, -A+Aj, A-Aj, -A+Aj, A-Aj, -A-Aj, -A+Aj, -A+Aj, A+Aj, A+Aj, A-Aj, -A-Aj, -A-Aj, -A-Aj, -A+Aj, -A-Aj, A-Aj, -A+Aj, -A+Aj, -A-Aj, -A+Aj, -A+Aj, -A+Aj, -A-Aj, A+Aj, A-Aj, -A-Aj, A-Aj, A+Aj, -A-Aj, A-Aj, A-Aj, A+Aj, A+Aj, -A-Aj, -A+Aj, A-Aj, A+Aj, A+Aj, A-Aj, A-Aj, A+Aj, -A+Aj, A+Aj, -A-Aj, -A-Aj, A+Aj, -A+Aj, -A-Aj, A-Aj, A+Aj, A-Aj, -A+Aj, A+Aj, - A+Aj, A+Aj, A-Aj, A+Aj, A-Aj, A+Aj, -A-Aj |
| 18 | Polarization 1 | -A-Aj, -A-Aj, A+Aj, A+Aj, -A+Aj, A-Aj, -A+Aj, -A-Aj, -A+Aj, -A+Aj, A+Aj, -A+Aj, A+Aj, -A-Aj, A-Aj, A-Aj, -A+Aj, A-Aj, -A-Aj, A+Aj, -A-Aj, A+Aj, -A+Aj, -A-Aj, -A-Aj, A-Aj, A-Aj, A+Aj, -A+Aj, -A+Aj, -A+Aj, -A-Aj, -A+Aj, A+Aj, -A-Aj, -A-Aj, -A+Aj, -A-Aj, -A-Aj, -A-Aj, -A+Aj, A-Aj, A+Aj, -A+Aj, A+Aj, A-Aj, -A+Aj, A+Aj, A+Aj, A-Aj, A-Aj, -A+Aj, -A-Aj, A+Aj, A-Aj, A-Aj, A+Aj, A+Aj, A-Aj, -A-Aj, A-Aj, -A+Aj, -A+Aj, A-Aj, -A-Aj, -A+Aj, A+Aj, A-Aj, A+Aj, -A-Aj, A-Aj, -A-Aj, A-Aj, A+Aj, A-Aj, A+Aj, A-Aj, -A+Aj |
| | Polarization 2 | A-Aj, A-Aj, -A+Aj, -A+Aj, A+Aj, -A-Aj, A+Aj, A-Aj, A+Aj, A+Aj, -A+Aj, A+Aj, -A+Aj, A-Aj, -A-Aj, -A-Aj, A+Aj, -A-Aj, A-Aj, -A+Aj, A-Aj, -A+Aj, A+Aj, A-Aj, A-Aj, -A-Aj, -A-Aj, -A+Aj, A+Aj, A+Aj, A+Aj, A-Aj, A+Aj, -A+Aj, A-Aj, A-Aj, A+Aj, A-Aj, A-Aj, A-Aj, A+Aj, -A-Aj, -A+Aj, A+Aj, - A+Aj, -A-Aj, A+Aj, -A+Aj, -A+Aj, -A-Aj, -A-Aj, A+Aj, A-Aj, -A+Aj, -A-Aj, -A-Aj, -A+Aj, -A+Aj, -A-Aj, A-Aj, -A-Aj, A+Aj, A+Aj, -A-Aj, A-Aj, A+Aj, -A+Aj, -A-Aj, -A+Aj, A-Aj, -A-Aj, A-Aj, -A-Aj, -A+Aj, -A-Aj, -A+Aj, -A-Aj, A+Aj |
| 19 | Polarization 1 | A+Aj, A+Aj, -A-Aj, -A-Aj, A-Aj, -A+Aj, A-Aj, A+Aj, A-Aj, A-Aj, -A-Aj, A-Aj, -A-Aj, A+Aj, -A+Aj, -A+Aj, A-Aj, -A+Aj, A+Aj, -A-Aj, A+Aj, -A-Aj, A-Aj, A+Aj, A+Aj, -A+Aj, -A+Aj, -A-Aj, A-Aj, A-Aj, A-Aj, A+Aj, A-Aj, -A-Aj, A+Aj, A+Aj, A-Aj, A+Aj, A+Aj, A+Aj, A-Aj, -A+Aj, -A-Aj, A-Aj, -A-Aj, -A+Aj, A-Aj, -A-Aj, -A-Aj, -A+Aj, -A+Aj, A-Aj, A+Aj, -A-Aj, -A+Aj, -A+Aj, -A-Aj, -A-Aj, - A+Aj, A+Aj, -A+Aj, A-Aj, A-Aj, -A+Aj, A+Aj, A-Aj, -A-Aj, -A+Aj, -A-Aj, A+Aj, -A+Aj, A+Aj, - A+Aj, -A-Aj, -A+Aj, -A-Aj, -A+Aj, A-Aj |
| | Polarization 2 | -A+Aj, -A+Aj, A-Aj, A-Aj, -A-Aj, A+Aj, -A-Aj, -A+Aj, -A-Aj, -A-Aj, A-Aj, -A-Aj, A-Aj, -A+Aj, A+Aj, A+Aj, -A-Aj, A+Aj, -A+Aj, A-Aj, -A+Aj, A-Aj, -A-Aj, -A+Aj, -A+Aj, A+Aj, A+Aj, A-Aj, -A-Aj, -A-Aj, -A-Aj, -A+Aj, -A-Aj, A-Aj, -A+Aj, -A+Aj, -A-Aj, -A+Aj, -A+Aj, -A-Aj, A+Aj, A-Aj, -A-Aj, A-Aj, A+Aj, -A-Aj, A-Aj, A-Aj, A+Aj, A+Aj, -A-Aj, -A+Aj, A-Aj, A+Aj, A+Aj, A-Aj, A-Aj, A+Aj, -A+Aj, A+Aj, -A-Aj, -A-Aj, A+Aj, -A+Aj, -A-Aj, A-Aj, A+Aj, A-Aj, -A+Aj, A+Aj, - A+Aj, A+Aj, A-Aj, A+Aj, A-Aj, A+Aj, -A-Aj |
| 20 | Polarization 1 | A+Aj, A+Aj, -A-Aj, -A-Aj, A-Aj, -A+Aj, A-Aj, A+Aj, A-Aj, A-Aj, -A-Aj, A-Aj, -A-Aj, A+Aj, -A+Aj, -A+Aj, A-Aj, -A+Aj, A+Aj, -A-Aj, A+Aj, -A-Aj, A-Aj, A+Aj, A+Aj, -A+Aj, -A+Aj, -A-Aj, A-Aj, A-Aj, A-Aj, A+Aj, A-Aj, -A-Aj, A+Aj, A+Aj, A-Aj, A+Aj, A+Aj, A+Aj, A-Aj, -A+Aj, -A-Aj, A-Aj, -A-Aj, -A+Aj, A-Aj, -A-Aj, -A-Aj, -A+Aj, -A+Aj, A-Aj, A+Aj, -A-Aj, -A+Aj, -A+Aj, -A-Aj, -A-Aj, - A+Aj, A+Aj, -A+Aj, A-Aj, A-Aj, -A+Aj, A+Aj, A-Aj, -A-Aj, -A+Aj, -A-Aj, A+Aj, -A+Aj, A+Aj, - A+Aj, -A-Aj, -A+Aj, -A-Aj, -A+Aj, A-Aj |
| | Polarization 2 | A-Aj, A-Aj, -A+Aj, -A+Aj, A+Aj, -A-Aj, A+Aj, A-Aj, A+Aj, A+Aj, -A+Aj, A+Aj, -A+Aj, A-Aj, -A-Aj, -A-Aj, A+Aj, -A-Aj, A-Aj, -A+Aj, A-Aj, -A+Aj, A+Aj, A-Aj, A-Aj, -A-Aj, -A-Aj, -A+Aj, A+Aj, A+Aj, A-Aj, A+Aj, -A+Aj, A-Aj, A-Aj, A+Aj, A-Aj, A-Aj, A-Aj, A+Aj, -A-Aj, -A+Aj, A+Aj, - A+Aj, -A-Aj, A+Aj, -A+Aj, -A+Aj, -A-Aj, -A-Aj, A+Aj, A-Aj, -A+Aj, -A-Aj, -A-Aj, -A+Aj, -A+Aj, -A-Aj, A-Aj, -A-Aj, A+Aj, A+Aj, -A-Aj, A-Aj, A+Aj, -A+Aj, -A-Aj, -A+Aj, A-Aj, -A-Aj, A-Aj, -A-Aj, -A+Aj, -A-Aj, -A+Aj, -A-Aj, A+Aj |

(continued)

| Index | Polarization | Pilot sequence |
|---|---|---|
| 21 | Polarization 1 | -A+Aj, A+Aj, -A-Aj, -A-Aj, A+Aj, -A+Aj, A+Aj, -A+Aj, -A-Aj, A+Aj, -A-Aj, -A+Aj, -A+Aj, -A+Aj, A-Aj, -A-Aj, -A-Aj, A-Aj, A+Aj, A+Aj, -A-Aj, -A+Aj, A+Aj, -A+Aj, A-Aj, A+Aj, -A-Aj, A-Aj, -A+Aj, -A+Aj, -A-Aj, A-Aj, -A-Aj, -A+Aj, -A-Aj, A+Aj, A-Aj, -A+Aj, -A+Aj, A-Aj, A-Aj, -A-Aj, A-Aj, -A-Aj, A+Aj, -A-Aj, A+Aj, -A+Aj, -A+Aj, -A+Aj, -A-Aj, -A-Aj, -A-Aj, -A+Aj, A+Aj, A+Aj, A-Aj, A+Aj, A+Aj, A-Aj, -A+Aj, A+Aj, A-Aj, A-Aj, A+Aj, A-Aj, -A-Aj, -A+Aj, A-Aj, A+Aj, A-Aj, A-Aj, -A+Aj, A-Aj, -A-Aj, A-Aj, A-Aj, A+Aj |
| | Polarization 2 | -A-Aj, A-Aj, -A+Aj, -A+Aj, A-Aj, -A-Aj, A-Aj, -A-Aj, -A+Aj, A-Aj, -A+Aj, -A-Aj, -A-Aj, -A-Aj, A+Aj, -A+Aj, -A+Aj, A+Aj, A-Aj, A-Aj, -A+Aj, -A-Aj, A-Aj, -A-Aj, A+Aj, A-Aj, -A+Aj, A+Aj, -A-Aj, -A-Aj, -A+Aj, A+Aj, -A+Aj, -A-Aj, -A+Aj, A-Aj, A+Aj, -A-Aj, -A-Aj, A+Aj, A+Aj, -A+Aj, A+Aj, -A+Aj, A-Aj, -A+Aj, A-Aj, -A-Aj, -A-Aj, -A-Aj, -A+Aj, -A+Aj, -A+Aj, -A-Aj, A-Aj, A-Aj, A+Aj, A-Aj, A-Aj, A+Aj, -A-Aj, A-Aj, A+Aj, A+Aj, A-Aj, A+Aj, -A-Aj, A+Aj, A-Aj, A+Aj, A+Aj, -A-Aj, A+Aj, -A+Aj, A+Aj, A+Aj, A-Aj |
| 22 | Polarization 1 | -A+Aj, A+Aj, -A-Aj, -A-Aj, A+Aj, -A+Aj, A+Aj, -A+Aj, -A-Aj, A+Aj, -A-Aj, -A+Aj, -A+Aj, -A+Aj, A-Aj, -A-Aj, -A-Aj, A-Aj, A+Aj, A+Aj, -A-Aj, -A+Aj, A+Aj, -A+Aj, A-Aj, A+Aj, -A-Aj, A-Aj, -A+Aj, -A+Aj, -A-Aj, A-Aj, -A-Aj, -A+Aj, -A-Aj, A+Aj, A-Aj, -A+Aj, -A+Aj, A-Aj, A-Aj, -A-Aj, A-Aj, -A-Aj, A+Aj, -A-Aj, A+Aj, -A+Aj, -A+Aj, -A+Aj, -A-Aj, -A-Aj, -A-Aj, -A+Aj, A+Aj, A+Aj, A-Aj, A+Aj, A+Aj, A-Aj, -A+Aj, A+Aj, A-Aj, A-Aj, A+Aj, A-Aj, -A-Aj, -A+Aj, A-Aj, A+Aj, A-Aj, A-Aj, -A+Aj, A-Aj, -A-Aj, A-Aj, A-Aj, A+Aj |
| | Polarization 2 | A+Aj, -A+Aj, A-Aj, A-Aj, -A+Aj, A+Aj, -A+Aj, A+Aj, A-Aj, -A+Aj, A-Aj, A+Aj, A+Aj, A+Aj, -A-Aj, A-Aj, A-Aj, -A-Aj, -A+Aj, -A+Aj, A-Aj, A+Aj, -A+Aj, A+Aj, -A-Aj, -A+Aj, A-Aj, -A-Aj, A+Aj, A+Aj, A-Aj, -A-Aj, A-Aj, A+Aj, A-Aj, -A-Aj, A-Aj, A+Aj, A-Aj, -A+Aj, -A-Aj, A+Aj, A+Aj, -A-Aj, -A-Aj, A-Aj, -A-Aj, A-Aj, -A+Aj, A-Aj, -A+Aj, A+Aj, A+Aj, A+Aj, A-Aj, A-Aj, A-Aj, A+Aj, -A+Aj, -A+Aj, -A-Aj, -A+Aj, -A+Aj, -A-Aj, A+Aj, -A+Aj, -A-Aj, -A-Aj, -A+Aj, -A-Aj, A-Aj, A+Aj, -A-Aj, -A+Aj, -A-Aj, -A-Aj, A+Aj, -A-Aj, A-Aj, -A-Aj, -A-Aj, -A+Aj |
| 23 | Polarization 1 | A-Aj, -A-Aj, A+Aj, A+Aj, -A-Aj, A-Aj, -A-Aj, A-Aj, A+Aj, -A-Aj, A+Aj, A-Aj, A-Aj, A-Aj, -A+Aj, A+Aj, A+Aj, -A+Aj, -A-Aj, -A-Aj, A+Aj, A-Aj, -A-Aj, A-Aj, -A+Aj, -A-Aj, A+Aj, -A+Aj, A-Aj, A-Aj, A+Aj, -A+Aj, A+Aj, A-Aj, A+Aj, -A-Aj, -A+Aj, A-Aj, A-Aj, -A+Aj, -A+Aj, A+Aj, -A+Aj, A+Aj, -A-Aj, A+Aj, -A-Aj, A-Aj, A-Aj, A-Aj, A+Aj, A+Aj, A+Aj, A-Aj, -A-Aj, -A-Aj, -A+Aj, -A-Aj, -A-Aj, -A+Aj, A-Aj, -A-Aj, -A+Aj, -A+Aj, -A-Aj, -A+Aj, A+Aj, A-Aj, -A+Aj, -A-Aj, -A+Aj, -A+Aj, A-Aj, -A+Aj, A+Aj, -A+Aj, -A+Aj, -A-Aj |
| | Polarization 2 | -A-Aj, A-Aj, -A+Aj, -A+Aj, A-Aj, -A-Aj, A-Aj, -A-Aj, -A+Aj, A-Aj, -A+Aj, -A-Aj, -A-Aj, -A-Aj, A+Aj, -A+Aj, -A+Aj, A+Aj, A-Aj, A-Aj, -A+Aj, -A-Aj, A-Aj, -A-Aj, A+Aj, A-Aj, -A+Aj, A+Aj, -A-Aj, -A-Aj, -A+Aj, A+Aj, -A+Aj, -A-Aj, -A+Aj, A-Aj, A+Aj, -A-Aj, -A-Aj, A+Aj, A+Aj, -A+Aj, A+Aj, -A+Aj, A-Aj, -A+Aj, A-Aj, -A-Aj, -A-Aj, -A-Aj, -A+Aj, -A+Aj, -A+Aj, -A-Aj, A-Aj, A-Aj, A+Aj, A-Aj, A-Aj, A+Aj, -A-Aj, A-Aj, A+Aj, A+Aj, A-Aj, A+Aj, -A+Aj, -A-Aj, A+Aj, A-Aj, A+Aj, A+Aj, -A-Aj, A+Aj, -A+Aj, A+Aj, A+Aj, A-Aj |
| 24 | Polarization 1 | A-Aj, -A-Aj, A+Aj, A+Aj, -A-Aj, A-Aj, -A-Aj, A-Aj, A+Aj, -A-Aj, A+Aj, A-Aj, A-Aj, A-Aj, -A+Aj, A+Aj, A+Aj, -A+Aj, -A-Aj, -A-Aj, A+Aj, A-Aj, -A-Aj, A-Aj, -A+Aj, -A-Aj, A+Aj, -A+Aj, A-Aj, A-Aj, A+Aj, -A+Aj, A+Aj, A-Aj, A+Aj, -A-Aj, -A+Aj, A-Aj, A-Aj, -A+Aj, -A+Aj, A+Aj, -A+Aj, A+Aj, -A-Aj, A+Aj, -A-Aj, A-Aj, A-Aj, A-Aj, A+Aj, A+Aj, A+Aj, A-Aj, -A-Aj, -A-Aj, -A+Aj, -A-Aj, -A-Aj, -A+Aj, A-Aj, -A-Aj, -A+Aj, -A+Aj, -A-Aj, -A+Aj, A+Aj, A-Aj, -A+Aj, -A-Aj, -A+Aj, -A+Aj, A-Aj, -A+Aj, A+Aj, -A+Aj, -A+Aj, -A-Aj |
| | Polarization 2 | A+Aj, -A+Aj, A-Aj, A-Aj, -A+Aj, A+Aj, -A+Aj, A+Aj, A-Aj, -A+Aj, A-Aj, A+Aj, A+Aj, A+Aj, -A-Aj, A-Aj, A-Aj, -A-Aj, -A+Aj, -A+Aj, A-Aj, A+Aj, -A+Aj, A+Aj, -A-Aj, -A+Aj, A-Aj, -A-Aj, A+Aj, A+Aj, A-Aj, -A-Aj, A-Aj, A+Aj, A-Aj, -A-Aj, -A-Aj, A+Aj, A-Aj, -A+Aj, -A-Aj, A+Aj, A+Aj, -A-Aj, -A-Aj, A-Aj, -A-Aj, A-Aj, -A+Aj, A-Aj, -A+Aj, A+Aj, A+Aj, A+Aj, A-Aj, A-Aj, A-Aj, A+Aj, -A+Aj, -A+Aj, -A-Aj, -A+Aj, -A+Aj, -A-Aj, A+Aj, -A+Aj, -A-Aj, -A-Aj, -A+Aj, -A-Aj, A-Aj, A+Aj, -A-Aj, -A+Aj, -A-Aj, -A-Aj, A+Aj, -A-Aj, A-Aj, -A-Aj, -A-Aj, -A+Aj |

(continued)

| Index | Polarization | Pilot sequence |
|---|---|---|
| 25 | Polarization 1 | A-Aj, A+Aj, -A-Aj, -A-Aj, A+Aj, A+Aj, -A+Aj, A+Aj, -A-Aj, A-Aj, A+Aj, A+Aj, -A+Aj, -A+Aj, -A+Aj, -A-Aj, A+Aj, -A-Aj, -A-Aj, A+Aj, -A+Aj, A-Aj, A-Aj, -A+Aj, -A-Aj, -A-Aj, A-Aj, -A-Aj, A-Aj, A+Aj, A+Aj, -A-Aj, -A-Aj, A+Aj, A-Aj, -A-Aj, -A+Aj, A-Aj, -A+Aj, A-Aj, -A+Aj, A+Aj, A-Aj, A-Aj, -A+Aj, -A-Aj, A-Aj, -A+Aj, -A+Aj, A+Aj, -A+Aj, -A-Aj, -A+Aj, -A+Aj, -A-Aj, -A-Aj, A+Aj, A-Aj, A-Aj, A-Aj, A+Aj, -A-Aj, -A-Aj, A-Aj, A-Aj, A+Aj, -A+Aj, A+Aj, A+Aj, -A+Aj, -A+Aj, A-Aj, A-Aj, -A-Aj, A+Aj, -A+Aj, -A+Aj, A-Aj |
| | Polarization 2 | A+Aj, A+Aj, A+Aj, A-Aj, -A+Aj, -A-Aj, A+Aj, -A+Aj, A-Aj, A+Aj, -A-Aj, A-Aj, A-Aj, -A+Aj, -A+Aj, -A-Aj, -A+Aj, -A-Aj, A+Aj, -A+Aj, -A-Aj, -A-Aj, -A+Aj, A+Aj, -A-Aj, A-Aj, -A-Aj, -A+Aj, A-Aj, A-Aj, -A-Aj, A-Aj, -A-Aj, A+Aj, -A-Aj, A-Aj, A+Aj, A-Aj, -A-Aj, A+Aj, A+Aj, A+Aj, A-Aj, A-Aj, A-Aj, -A-Aj, A-Aj, A+Aj, -A+Aj, A+Aj, -A+Aj, A-Aj, -A-Aj, A+Aj, -A-Aj, A+Aj, A-Aj, -A-Aj, A-Aj, -A-Aj, A-Aj, -A+Aj, -A-Aj, -A+Aj, -A+Aj, -A+Aj, -A+Aj, -A+Aj, -A-Aj, -A+Aj, A+Aj, - A+Aj, A-Aj, A+Aj, -A+Aj, A+Aj, -A-Aj, A+Aj |
| 26 | Polarization 1 | A-Aj, A+Aj, -A-Aj, -A-Aj, A+Aj, A+Aj, -A+Aj, A+Aj, -A-Aj, A-Aj, A+Aj, A+Aj, -A+Aj, -A+Aj, -A+Aj, -A-Aj, A+Aj, -A-Aj, -A-Aj, A+Aj, -A+Aj, A-Aj, A-Aj, -A+Aj, -A-Aj, -A-Aj, A-Aj, -A-Aj, A-Aj, A+Aj, A+Aj, -A-Aj, -A-Aj, A+Aj, A-Aj, -A-Aj, -A+Aj, A-Aj, -A+Aj, A-Aj, -A+Aj, A+Aj, A-Aj, A-Aj, -A+Aj, -A-Aj, A-Aj, -A+Aj, -A+Aj, A+Aj, -A+Aj, -A-Aj, -A+Aj, -A+Aj, -A-Aj, -A-Aj, A+Aj, A-Aj, A-Aj, A-Aj, A+Aj, -A-Aj, -A-Aj, A-Aj, A-Aj, A+Aj, -A+Aj, A+Aj, A+Aj, -A+Aj, -A+Aj, A-Aj, A-Aj, -A-Aj, A+Aj, -A+Aj, -A+Aj, A-Aj |
| | Polarization 2 | A+Aj, A+Aj, A+Aj, A+Aj, A-Aj, -A+Aj, -A-Aj, A+Aj, -A+Aj, A-Aj, A+Aj, -A-Aj, A-Aj, A-Aj, -A+Aj, -A+Aj, -A-Aj, -A+Aj, -A-Aj, A+Aj, -A+Aj, -A-Aj, -A-Aj, -A+Aj, A+Aj, -A-Aj, A-Aj, -A-Aj, -A+Aj, A-Aj, A-Aj, -A-Aj, A-Aj, -A-Aj, A+Aj, -A-Aj, A-Aj, A+Aj, A-Aj, -A-Aj, A+Aj, A+Aj, A+Aj, A-Aj, A-Aj, A-Aj, -A-Aj, A-Aj, A+Aj, -A+Aj, A+Aj, -A+Aj, A-Aj, -A-Aj, A+Aj, -A-Aj, A+Aj, A-Aj, -A-Aj, A-Aj, -A-Aj, A-Aj, -A+Aj, -A-Aj, -A+Aj, -A+Aj, -A+Aj, -A+Aj, -A+Aj, -A-Aj, -A+Aj, A+Aj, -A+Aj, A-Aj, A+Aj, -A+Aj, A+Aj, -A-Aj |
| 27 | Polarization 1 | A+Aj, -A+Aj, -A+Aj, -A+Aj, -A+Aj, -A+Aj, A-Aj, A+Aj, A+Aj, -A-Aj, A-Aj, -A-Aj, A+Aj, -A-Aj, -A+Aj, A+Aj, A-Aj, A-Aj, A+Aj, A-Aj, A+Aj, -A-Aj, -A-Aj, A+Aj, -A-Aj, -A-Aj, A-Aj, -A+Aj, A+Aj, A+Aj, -A+Aj, -A-Aj, -A-Aj, -A+Aj, -A+Aj, A-Aj, A+Aj, A-Aj, A-Aj, -A-Aj, -A+Aj, -A-Aj, -A+Aj, -A-Aj, -A-Aj, -A-Aj, -A+Aj, A+Aj, -A-Aj, A+Aj, A-Aj, A-Aj, -A-Aj, A-Aj, -A+Aj, -A+Aj, A+Aj, A-Aj, A-Aj, A-Aj, -A-Aj, -A+Aj, -A+Aj, A+Aj, A-Aj, -A+Aj, A+Aj, -A-Aj, A-Aj, A+Aj, -A+Aj, -A+Aj, A-Aj, A-Aj, A-Aj, A+Aj, A+Aj, -A-Aj |
| | Polarization 2 | -A-Aj, A+Aj, A-Aj, -A-Aj, A+Aj, -A-Aj, A+Aj, -A-Aj, -A-Aj, -A-Aj, A-Aj, -A+Aj, -A+Aj, -A-Aj, A+Aj, A-Aj, -A+Aj, A-Aj, A+Aj, A-Aj, -A-Aj, A+Aj, A+Aj, A-Aj, -A-Aj, A+Aj, A-Aj, -A-Aj, A-Aj, A-Aj, -A+Aj, -A+Aj, A+Aj, -A+Aj, A+Aj, A-Aj, A+Aj, A+Aj, A+Aj, -A-Aj, -A+Aj, -A-Aj, -A+Aj, - A+Aj, A-Aj, A-Aj, -A-Aj, -A-Aj, -A+Aj, A-Aj, -A+Aj, -A-Aj, A+Aj, A-Aj, A+Aj, -A+Aj, -A+Aj, -A-Aj, -A+Aj, -A-Aj, -A+Aj, A-Aj, A+Aj, A-Aj, A+Aj, A-Aj, A+Aj, -A+Aj, A-Aj, -A+Aj, -A+Aj, A+Aj, A+Aj, -A-Aj, -A-Aj, -A+Aj, A-Aj, -A-Aj |
| 28 | Polarization 1 | -A+Aj, A-Aj, A-Aj, A+Aj, -A-Aj, -A+Aj, -A+Aj, A-Aj, A-Aj, A+Aj, A+Aj, A-Aj, A+Aj, -A+Aj, -A+Aj, -A-Aj, -A-Aj, A+Aj, -A+Aj, -A+Aj, -A+Aj, A+Aj, -A-Aj, -A-Aj, A-Aj, A-Aj, -A-Aj, A-Aj, A+Aj, A-Aj, A-Aj, -A+Aj, -A-Aj, A-Aj, -A+Aj, -A+Aj, A+Aj, A-Aj, -A+Aj, A-Aj, -A+Aj, A-Aj, -A-Aj, -A+Aj, A+Aj, -A-Aj, -A-Aj, A+Aj, A+Aj, -A+Aj, -A-Aj, -A+Aj, -A-Aj, -A-Aj, A-Aj, -A+Aj, -A+Aj, A-Aj, A+Aj, -A-Aj, -A-Aj, A+Aj, -A-Aj, A-Aj, A-Aj, A-Aj, A+Aj, A+Aj, -A+Aj, -A-Aj, A+Aj, A-Aj, A+Aj, A+Aj, -A-Aj, -A-Aj, A+Aj, -A+Aj |
| | Polarization 2 | -A-Aj, A+Aj, A-Aj, A+Aj, -A+Aj, A-Aj, A+Aj, A-Aj, -A-Aj, A-Aj, A-Aj, A-Aj, A-Aj, A-Aj, -A-Aj, A-Aj, -A+Aj, -A-Aj, -A+Aj, -A-Aj, -A+Aj, A+Aj, -A-Aj, A+Aj, -A-Aj, -A+Aj, A-Aj, A+Aj, A-Aj, A+Aj, -A+Aj, -A-Aj, -A+Aj, -A+Aj, -A+Aj, A+Aj, A+Aj, A+Aj, -A-Aj, -A+Aj, A+Aj, -A+Aj, -A-Aj, A+Aj, -A-Aj, -A+Aj, A-Aj, -A+Aj, -A+Aj, A-Aj, -A-Aj, -A+Aj, -A-Aj, A+Aj, A-Aj, -A-Aj, -A-Aj, A-Aj, A+Aj, -A-Aj, A-Aj, -A-Aj, A-Aj, A-Aj, -A+Aj, -A+Aj, -A-Aj, A+Aj, -A+Aj, A-Aj, A+Aj, -A-Aj, A-Aj, -A+Aj, A+Aj, A+Aj, A+Aj, A+Aj |

(continued)

| Index | Polarization | Pilot sequence |
|---|---|---|
| 29 | Polarization 1 | -A+Aj, A-Aj, A-Aj, A+Aj, -A-Aj, -A+Aj, -A+Aj, A-Aj, A-Aj, A+Aj, A+Aj, A-Aj, A+Aj, -A+Aj, -A+Aj, -A-Aj, -A-Aj, A+Aj, -A+Aj, -A+Aj, -A+Aj, A+Aj, -A-Aj, -A-Aj, A-Aj, A-Aj, -A-Aj, A-Aj, A+Aj, A-Aj, A-Aj, -A+Aj, -A-Aj, A-Aj, -A+Aj, -A+Aj, A+Aj, A-Aj, -A+Aj, A-Aj, -A+Aj, A-Aj, -A-Aj, -A+Aj, A+Aj, -A-Aj, -A-Aj, A+Aj, A+Aj, -A+Aj, -A-Aj, -A+Aj, -A-Aj, -A-Aj, A-Aj, -A+Aj, -A+Aj, A-Aj, A+Aj, -A-Aj, -A-Aj, A+Aj, -A-Aj, A-Aj, A-Aj, A-Aj, A+Aj, A+Aj, -A+Aj, -A-Aj, A+Aj, A-Aj, A+Aj, A+Aj, -A-Aj, -A-Aj, A+Aj, -A+Aj |
| | Polarization 2 | A+Aj, -A-Aj, A+Aj, A-Aj, A+Aj, -A+Aj, A-Aj, A+Aj, A-Aj, -A-Aj, A-Aj, A-Aj, A-Aj, A-Aj, A-Aj, -A-Aj, A-Aj, -A+Aj, -A-Aj, -A+Aj, -A-Aj, -A+Aj, A+Aj, -A-Aj, A+Aj, -A-Aj, -A+Aj, A-Aj, A+Aj, A-Aj, A+Aj, -A+Aj, -A-Aj, -A+Aj, -A+Aj, -A+Aj, A+Aj, A+Aj, A+Aj, -A-Aj, -A+Aj, A+Aj, -A+Aj, - A-Aj, A+Aj, -A-Aj, -A+Aj, -A-Aj, -A+Aj, -A+Aj, A-Aj, -A-Aj, -A+Aj, -A-Aj, A+Aj, A-Aj, -A-Aj, - A-Aj, A-Aj, A+Aj, -A-Aj, A-Aj, -A-Aj, A-Aj, A-Aj, -A+Aj, -A+Aj, -A-Aj, A+Aj, -A+Aj, A-Aj, A+Aj, -A-Aj, A-Aj, -A+Aj, A+Aj, A+Aj, A+Aj |
| 30 | Polarization 1 | -A-Aj, A+Aj, A+Aj, -A+Aj, -A+Aj, -A+Aj, A-Aj, A-Aj, A+Aj, -A+Aj, -A-Aj, A+Aj, A-Aj, -A+Aj, A+Aj, A-Aj, A-Aj, -A-Aj, -A+Aj, -A+Aj, -A+Aj, A+Aj, A-Aj, A-Aj, -A+Aj, -A-Aj, -A+Aj, -A+Aj, A+Aj, -A-Aj, A+Aj, A-Aj, -A-Aj, -A-Aj, -A-Aj, A-Aj, -A-Aj, A-Aj, -A-Aj, -A+Aj, -A+Aj, A+Aj, -A+Aj, A-Aj, A-Aj, -A-Aj, -A-Aj, A-Aj, A+Aj, A+Aj, A-Aj, -A+Aj, -A-Aj, -A-Aj, A+Aj, -A-Aj, -A-Aj, A+Aj, -A+Aj, A+Aj, -A+Aj, -A+Aj, A+Aj, A-Aj, -A-Aj, A+Aj, -A-Aj, -A+Aj, -A-Aj, A+Aj, A+Aj, -A+Aj, A-Aj, A-Aj, A-Aj, A-Aj, A-Aj, A+Aj |
| | Polarization 2 | -A-Aj, -A+Aj, A-Aj, -A-Aj, -A-Aj, A+Aj, A+Aj, A-Aj, A-Aj, -A+Aj, A-Aj, A+Aj, -A+Aj, A+Aj, - A+Aj, A+Aj, -A+Aj, A-Aj, -A-Aj, A-Aj, -A-Aj, A-Aj, A-Aj, A+Aj, -A+Aj, A+Aj, -A-Aj, A-Aj, - A+Aj, A-Aj, -A-Aj, -A-Aj, -A+Aj, -A+Aj, A-Aj, A-Aj, -A-Aj, A-Aj, -A-Aj, A+Aj, A+Aj, A+Aj, - A+Aj, A+Aj, A-Aj, A+Aj, A-Aj, A-Aj, -A+Aj, -A+Aj, -A-Aj, -A+Aj, A+Aj, -A-Aj, -A+Aj, A+Aj, A+Aj, -A-Aj, -A+Aj, A+Aj, -A+Aj, A-Aj, -A+Aj, A+Aj, -A-Aj, A-Aj, A-Aj, -A+Aj, -A-Aj, -A-Aj, - A-Aj, A+Aj, -A-Aj, A+Aj, -A-Aj, -A+Aj, A+Aj, -A-Aj |

**Table 18-2**

| Index | Pilot sequence |
|---|---|
| 1 | -A-Aj, -A+Aj, A-Aj, A+Aj, A-Aj, A+Aj, A+Aj, -A+Aj, A+Aj, -A-Aj, A+Aj, A-Aj, A-Aj, -A+Aj, -A+Aj, A-Aj, - A-Aj, -A+Aj, A+Aj, -A+Aj, A-Aj, A-Aj, A+Aj, A+Aj, A-Aj, A+Aj, -A-Aj, -A+Aj, A+Aj, A-Aj, A-Aj, A-Aj, - A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, -A-Aj, A-Aj, -A-Aj, A-Aj, -A-Aj, -A+Aj, -A-Aj, -A+Aj, A-Aj, -A-Aj, A-Aj, A+Aj, -A+Aj |
| 2 | -A+Aj, A-Aj, A+Aj, A-Aj, A+Aj, A+Aj, -A+Aj, A+Aj, -A-Aj, A+Aj, A-Aj, A-Aj, -A+Aj, -A+Aj, A-Aj, -A-Aj, - A+Aj, A+Aj, -A+Aj, A-Aj, A-Aj, A+Aj, A+Aj, A-Aj, A+Aj, -A-Aj, -A+Aj, A+Aj, A-Aj, A-Aj, A-Aj, -A+Aj, A-Aj, A-Aj, -A- Aj, A+Aj, A-Aj, -A+Aj, -A+Aj, -A+Aj, -A-Aj, -A+Aj, -A+Aj, -A-Aj, A-Aj, -A+Aj, -A-Aj, -A-Aj, - A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, - A-Aj, A-Aj, -A-Aj, A-Aj, -A-Aj, -A+Aj, -A-Aj, -A+Aj, A-Aj, -A-Aj, A-Aj, A+Aj, -A+Aj, -A-Aj |
| 3 | A-Aj, -A+Aj, -A-Aj, -A+Aj, -A-Aj, -A-Aj, A-Aj, -A-Aj, A+Aj, -A-Aj, -A+Aj, -A+Aj, A-Aj, A-Aj, -A+Aj, A+Aj, A-Aj, -A-Aj, A-Aj, -A+Aj, -A+Aj, -A-Aj, -A-Aj, -A+Aj, -A-Aj, A+Aj, A-Aj, -A-Aj, -A+Aj, -A+Aj, -A+Aj, A-Aj, -A+Aj, -A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A- Aj, -A-Aj, -A-Aj, A-Aj, A+Aj, A+Aj, -A-Aj, A+Aj, -A-Aj, A-Aj, -A+Aj, A-Aj, -A-Aj, -A-Aj, A+Aj, -A+Aj, A+Aj, -A+Aj, A+Aj, A-Aj, A+Aj, A-Aj, -A+Aj, A+Aj, -A+Aj, -A-Aj, A-Aj, A+Aj |
| 4 | A+Aj, A-Aj, -A+Aj, -A-Aj, -A+Aj, -A-Aj, -A-Aj, A-Aj, -A-Aj, A+Aj, -A-Aj, -A+Aj, -A+Aj, A-Aj, A-Aj, -A+Aj, A+Aj, A-Aj, -A-Aj, A-Aj, -A+Aj, -A+Aj, -A-Aj, -A-Aj, -A+Aj, -A-Aj, A+Aj, A-Aj, -A-Aj, -A+Aj, -A+Aj, - A+Aj, A-Aj, -A+Aj, -A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj, -A+Aj, A-Aj, -A-Aj, -A-Aj, A+Aj, -A+Aj, A+Aj, -A+Aj, A+Aj, A-Aj, A+Aj, A-Aj, -A+Aj, A+Aj, -A+Aj, -A-Aj, A-Aj |

**Table 18-3**

| Index | Pilot sequence |
|---|---|
| 1 | -A-Aj, A+Aj, A-Aj, A+Aj, A-Aj, A-Aj, -A-Aj, A-Aj, -A+Aj, A-Aj, A+Aj, A+Aj, -A-Aj, -A-Aj, A+Aj, -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, - A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, - A+Aj, A+Aj, -A+Aj, A+Aj, -A+Aj, -A-Aj, -A+Aj, -A-Aj, A+Aj, -A+Aj, A+Aj, A-Aj, -A-Aj, -A+Aj |
| 2 | -A+Aj, -A-Aj, A+Aj, A-Aj, A+Aj, A-Aj, A-Aj, -A-Aj, A-Aj, -A+Aj, A-Aj, A+Aj, A+Aj, -A-Aj, -A-Aj, A+Aj, - A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, -A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, - A+Aj, A+Aj, -A+Aj, A+Aj, -A+Aj, -A-Aj, -A+Aj, -A-Aj, A+Aj, -A+Aj, A+Aj, A-Aj, -A-Aj |
| 3 | A-Aj, A+Aj, -A-Aj, -A+Aj, -A-Aj, -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj, -A-Aj, A-Aj, A+Aj, A-Aj, A+Aj, -A-Aj, A-Aj, -A-Aj, -A+Aj, A+Aj |
| 4 | A+Aj, -A-Aj, -A+Aj, -A-Aj, -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, - A-Aj, A-Aj, -A-Aj, A-Aj, A+Aj, A-Aj, A+Aj, -A-Aj, A-Aj, -A-Aj, -A+Aj, A+Aj, A-Aj |

**Table 18-4**

| Index | Pilot sequence |
|---|---|
| 1 | -A-Aj, A-Aj, A+Aj, -A+Aj, -A-Aj, -A+Aj, A-Aj, -A-Aj, A-Aj, -A-Aj, -A+Aj, -A-Aj, -A+Aj, -A-Aj, A+Aj, A+Aj, A-Aj, -A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, -A-Aj, A-Aj, A-Aj, -A-Aj, A-Aj, A-Aj, A-Aj, -A+Aj, A+Aj, -A-Aj, -A+Aj, -A+Aj, A-Aj, -A+Aj, -A+Aj, -A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj, -A+Aj, A-Aj |
| 2 | -A+Aj, -A-Aj, A-Aj, A+Aj, A-Aj, -A+Aj, A+Aj, -A+Aj, A+Aj, A-Aj, A+Aj, A-Aj, A+Aj, -A-Aj, -A-Aj, -A+Aj, A-Aj, -A+Aj, -A-Aj, A+Aj, -A-Aj, A+Aj, A+Aj, -A+Aj, -A-Aj, -A-Aj, -A-Aj, A+Aj, A+Aj, A+Aj, A+Aj, -A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, -A+Aj, -A+Aj, A-Aj, A-Aj, -A-Aj, A+Aj, -A-Aj, -A+Aj, -A-Aj, -A-Aj, A-Aj, -A-Aj, A-Aj, -A+Aj, A+Aj |
| 3 | A-Aj, A+Aj, -A+Aj, -A-Aj, -A+Aj, A-Aj, -A-Aj, A-Aj, -A-Aj, -A+Aj, -A-Aj, -A+Aj, -A-Aj, A+Aj, A+Aj, A-Aj, - A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, - A+Aj, -A-Aj, A-Aj, A-Aj, -A-Aj, A-Aj, A-Aj, A-Aj, -A+Aj, A+Aj, -A-Aj, -A+Aj, -A+Aj, A-Aj, -A+Aj, -A+Aj, - A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj, -A+Aj, A-Aj, -A-Aj |
| 4 | A+Aj, -A+Aj, -A-Aj, A-Aj, A+Aj, A-Aj, -A+Aj, A+Aj, -A+Aj, A+Aj, A-Aj, A+Aj, A-Aj, A+Aj, -A-Aj, -A-Aj, - A+Aj, A-Aj, -A+Aj, -A-Aj, A+Aj, -A-Aj, A+Aj, A+Aj, -A+Aj, -A-Aj, -A-Aj, -A-Aj, A+Aj, A+Aj, A+Aj, A+Aj, - A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, -A+Aj, -A+Aj, A-Aj, A-Aj, -A-Aj, A+Aj, -A-Aj, -A+Aj, -A-Aj, -A-Aj, A-Aj, -A-Aj, A-Aj, -A+Aj |

**Table 18-5**

| Index | Pilot sequence |
|---|---|
| 1 | -A-Aj, -A+Aj, A+Aj, A-Aj, A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, -A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, -A+Aj, A+Aj, -A+Aj, -A+Aj, A+Aj, A+Aj. -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj, A+Aj, -A+Aj, A+Aj, -A-Aj, A-Aj |
| 2 | -A+Aj, A+Aj, A-Aj, -A-Aj, -A+Aj, -A-Aj, A+Aj, -A+Aj, A+Aj, -A+Aj, -A-Aj, -A+Aj, -A-Aj, -A+Aj, A-Aj, A-Aj, A+Aj, -A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, -A-Aj, A-Aj, A+Aj, -A+Aj, A-Aj, -A-Aj, A-Aj, A-Aj, -A-Aj, -A-Aj, A+Aj, A-Aj, A+Aj, -A+Aj, -A-Aj, A+Aj, A+Aj, -A-Aj, -A-Aj, A-Aj, -A+Aj, A-Aj, A+Aj, A-Aj, A-Aj, -A-Aj, A-Aj, -A-Aj, A+Aj |
| 3 | A-Aj, -A-Aj, -A+Aj, A+Aj, A-Aj, A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, -A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, - A+Aj, -A-Aj, A-Aj, -A+Aj, A+Aj, -A+Aj, -A+Aj, A+Aj, A+Aj, -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj, A+Aj, -A+Aj, A+Aj, -A-Aj |
| 4 | A+Aj, A-Aj, -A-Aj, -A+Aj, -A-Aj, A+Aj, -A+Aj, A+Aj, -A+Aj, -A-Aj, -A+Aj, -A-Aj, -A+Aj, A-Aj, A-Aj, A+Aj, -A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, -A-Aj, A-Aj, A+Aj, -A+Aj, A-Aj, -A-Aj, A-Aj, A-Aj, -A-Aj, -A-Aj, A+Aj, A-Aj, A+Aj, -A+Aj, -A-Aj, A+Aj, A+Aj, -A-Aj, - A-Aj, A-Aj, -A+Aj, A-Aj, A+Aj, A-Aj, A-Aj, -A-Aj, A-Aj, -A-Aj, A+Aj, -A+Aj |

(12) When $N_{PS}$ = 94, the pilot sequence is one item in Table 19.

**Table 19**

| Index | Polarization | Pilot sequence |
|---|---|---|
| 1 | Polarization 1 | -A+Aj, -A-Aj, -A+Aj, A-Aj, -A-Aj, A-Aj, -A+Aj, -A+Aj, -A-Aj, -A+Aj, A-Aj, A-Aj, -A+Aj, -A-Aj, A-Aj, -A+Aj, A-Aj, -A-Aj, -A+Aj, A+Aj, A-Aj, -A-Aj, A-Aj, A-Aj, A+Aj, A+Aj, -A+Aj, -A+Aj, A-Aj, - A-Aj, A-Aj, A+Aj, A-Aj, -A+Aj, A-Aj, A+Aj, -A+Aj, A+Aj, A+Aj, -A-Aj, A+Aj, -A-Aj, A+Aj, -A+Aj, -A-Aj, -A-Aj, A-Aj, -A+Aj, -A-Aj, -A+Aj, A+Aj, -A+Aj, -A-Aj, A-Aj, A+Aj, A+Aj, A-Aj, A+Aj, - A+Aj, -A-Aj, -A+Aj, A+Aj, A+Aj, A+Aj, A+Aj, -A-Aj, A-Aj, -A+Aj, -A+Aj, A-Aj, A-Aj, A+Aj, - A+Aj, -A-Aj, A+Aj, -A-Aj, A-Aj, -A-Aj, A-Aj, A+Aj, -A-Aj, A-Aj, A+Aj, -A-Aj, -A-Aj, -A-Aj, -A+Aj, A+Aj, -A+Aj, A-Aj, -A+Aj, A-Aj, -A-Aj, A+Aj |
| | Polarization 2 | A+Aj, A+Aj, -A-Aj, -A-Aj, A-Aj, -A-Aj, -A+Aj, A+Aj, -A-Aj, A+Aj, A+Aj, -A+Aj, A-Aj, -A-Aj, A+Aj, A-Aj, -A-Aj, A-Aj, -A-Aj, -A-Aj, A-Aj, A-Aj, -A-Aj, -A+Aj, A-Aj, -A+Aj, -A+Aj, -A-Aj, A+Aj, -A+Aj, A+Aj, A-Aj, -A+Aj, -A+Aj, A+Aj, -A+Aj, A-Aj, A+Aj, -A+Aj, -A+Aj, -A-Aj, -A+Aj, -A-Aj, - A+Aj, -A-Aj, A+Aj, A+Aj, A-Aj, -A-Aj, A+Aj, A+Aj, -A+Aj, -A-Aj, A+Aj, A-Aj, -A+Aj, -A+Aj, - A+Aj, A-Aj, A+Aj, -A-Aj, -A-Aj, A-Aj, A-Aj, A-Aj, A-Aj, A+Aj, A-Aj, -A-Aj, A+Aj, -A+Aj, A-Aj, - A+Aj, -A-Aj, A+Aj, A-Aj, A+Aj, A-Aj, -A-Aj, -A+Aj, A-Aj, A+Aj, A-Aj, -A+Aj, -A-Aj, -A-Aj, -A-Aj, -A-Aj, A-Aj, A+Aj, -A+Aj, A+Aj, -A+Aj, A+Aj |

(continued)

| Index | Polarization | Pilot sequence |
|---|---|---|
| 2 | Polarization 1 | -A+Aj, -A-Aj, -A+Aj, A-Aj, -A-Aj, A-Aj, -A+Aj, -A+Aj, -A-Aj, -A+Aj, A-Aj, A-Aj, -A+Aj, -A-Aj, A-Aj, -A+Aj, A-Aj, -A-Aj, -A+Aj, A+Aj, A-Aj, -A-Aj, A-Aj, A-Aj, A+Aj, A+Aj, -A+Aj, -A+Aj, A-Aj, -A-Aj, A-Aj, A+Aj, A-Aj, -A+Aj, A-Aj, A+Aj, -A+Aj, A+Aj, A+Aj, -A-Aj, A+Aj, -A-Aj, A+Aj, -A+Aj, -A-Aj, -A-Aj, A-Aj, -A+Aj, -A-Aj, -A+Aj, A+Aj, -A+Aj, -A-Aj, A-Aj, A+Aj, A+Aj, A-Aj, A+Aj, - A+Aj, -A-Aj, -A+Aj, A+Aj, A+Aj, A+Aj, A+Aj, -A-Aj, A-Aj, -A+Aj, -A+Aj, A-Aj, A-Aj, A+Aj, - A+Aj, -A-Aj, A+Aj, -A-Aj, A-Aj, -A-Aj, A-Aj, A+Aj, -A-Aj, A-Aj, A+Aj, -A-Aj, -A-Aj, -A-Aj, -A+Aj, A+Aj, -A+Aj, A-Aj, -A+Aj, A-Aj, -A-Aj, A+Aj |
| | Polarization 2 | A+Aj, A+Aj, A+Aj, -A-Aj, -A-Aj, A-Aj, -A-Aj, -A+Aj, A+Aj, -A-Aj, A+Aj, A+Aj, -A+Aj, A-Aj, -A-Aj, A+Aj, A-Aj, -A-Aj, A-Aj, -A-Aj, -A-Aj, A-Aj, A-Aj, -A-Aj, -A+Aj, A-Aj, -A+Aj, -A+Aj, -A-Aj, A+Aj, -A+Aj, A+Aj, A-Aj, -A+Aj, -A+Aj, A+Aj, -A+Aj, A-Aj, A+Aj, -A+Aj, -A+Aj, -A-Aj, -A+Aj, - A-Aj, -A+Aj, -A-Aj, A+Aj, A+Aj, A-Aj, -A-Aj, A+Aj, A+Aj, -A+Aj, -A-Aj, A+Aj, A-Aj, -A+Aj, - A+Aj, -A+Aj, A-Aj, A+Aj, -A-Aj, -A-Aj, A-Aj, A-Aj, A-Aj, A-Aj, A+Aj, A-Aj, -A-Aj, A+Aj, -A+Aj, A-Aj, -A+Aj, -A-Aj, A+Aj, A-Aj, A+Aj, A-Aj, -A-Aj, -A+Aj, A-Aj, A+Aj, A-Aj, -A+Aj, -A-Aj, -A-Aj, -A-Aj, -A-Aj, A-Aj, A+Aj, -A+Aj, A+Aj, -A+Aj |
| 3 | Polarization 1 | A+Aj, -A-Aj, -A+Aj, A-Aj, -A+Aj, A-Aj, A+Aj, A-Aj, -A-Aj, -A-Aj, -A-Aj, A+Aj, -A+Aj, -A-Aj, A+Aj, -A+Aj, -A-Aj, -A+Aj, -A-Aj, A+Aj, -A-Aj, A-Aj, A+Aj, -A+Aj, -A+Aj, A-Aj, A-Aj, -A+Aj, -A-Aj, A+Aj, A+Aj, A+Aj, A+Aj, A-Aj, -A-Aj, A-Aj, A+Aj, -A+Aj, A+Aj, A+Aj, -A+Aj, -A-Aj, A-Aj, A+Aj, A-Aj, -A-Aj, A-Aj, -A+Aj, -A-Aj, -A-Aj, A-Aj, A+Aj, -A-Aj, A+Aj, -A-Aj, A+Aj, A+Aj, A-Aj, A+Aj, -A+Aj, A-Aj, -A+Aj, A+Aj, -A+Aj, -A-Aj, -A+Aj, A-Aj, A-Aj, A+Aj, A+Aj, -A+Aj, -A+Aj, -A-Aj, -A+Aj, A+Aj, A-Aj, -A-Aj, -A+Aj, A-Aj, -A+Aj, -A-Aj, A-Aj, -A+Aj, -A+Aj, A-Aj, -A-Aj, A-Aj, A-Aj, -A+Aj, -A-Aj, -A+Aj, A-Aj, -A-Aj, A-Aj |
| | Polarization 2 | A-Aj, A+Aj, A-Aj, A+Aj, -A+Aj, -A-Aj, -A-Aj, -A-Aj, -A-Aj, A-Aj, -A+Aj, A+Aj, -A+Aj, A-Aj, -A-Aj, -A+Aj, A+Aj, -A+Aj, A+Aj, -A-Aj, A-Aj, -A+Aj, A-Aj, A+Aj, -A-Aj, -A+Aj, A+Aj, -A+Aj, -A+Aj, -A+Aj, -A+Aj, -A-Aj, -A-Aj, A+Aj, -A+Aj, A-Aj, A-Aj, A-Aj, -A+Aj, A+Aj, -A-Aj, A-Aj, A+Aj, A+Aj, -A-Aj, -A+Aj, A+Aj, A+Aj, -A-Aj, A-Aj, -A-Aj, A-Aj, -A-Aj, A-Aj, A-Aj, A+Aj, -A+Aj, A-Aj, A+Aj, A-Aj, A-Aj, -A+Aj, A+Aj, A-Aj, A+Aj, -A-Aj, A-Aj, A-Aj, -A+Aj, A-Aj, -A-Aj, -A+Aj, -A+Aj, -A-Aj, -A-Aj, -A+Aj, -A-Aj, -A+Aj, A+Aj, -A-Aj, -A+Aj, A-Aj, A+Aj, A+Aj, -A-Aj, A+Aj, A-Aj, -A-Aj, -A+Aj, -A-Aj, -A-Aj, A+Aj, A+Aj, A+Aj |
| 4 | Polarization 1 | A+Aj, -A-Aj, -A+Aj, A-Aj, -A+Aj, A-Aj, A+Aj, A-Aj, -A-Aj, -A-Aj, -A-Aj, A+Aj, -A+Aj, -A-Aj, A+Aj, -A+Aj, -A-Aj, -A+Aj, -A-Aj, A+Aj, -A-Aj, A-Aj, A+Aj, -A+Aj, -A+Aj, A-Aj, A-Aj, -A+Aj, -A-Aj, A+Aj, A+Aj, A+Aj, A+Aj, A-Aj, -A-Aj, A-Aj, A+Aj, -A+Aj, A+Aj, A+Aj, -A+Aj, -A-Aj, A-Aj, A+Aj, A-Aj, -A-Aj, A-Aj, -A+Aj, -A-Aj, -A-Aj, A-Aj, A+Aj, -A-Aj, A+Aj, -A-Aj, A+Aj, A+Aj, A-Aj, A+Aj, -A+Aj, A-Aj, -A+Aj, A+Aj, -A+Aj, -A-Aj, -A+Aj, A-Aj, A-Aj, A+Aj, A+Aj, -A+Aj, -A+Aj, -A-Aj, -A+Aj, A+Aj, A-Aj, -A-Aj, -A+Aj, A-Aj, -A+Aj, -A-Aj, A-Aj, -A+Aj, -A+Aj, A-Aj, -A-Aj, A-Aj, A-Aj, -A+Aj, -A-Aj, -A+Aj, A-Aj, -A-Aj, A-Aj |
| | Polarization 2 | A+Aj, A-Aj, A+Aj, A-Aj, A+Aj, -A+Aj, -A-Aj, -A-Aj, -A-Aj, -A-Aj, A-Aj, -A+Aj, A+Aj, -A+Aj, A-Aj, -A-Aj, -A+Aj, A+Aj, -A+Aj, A+Aj, -A-Aj, A-Aj, -A+Aj, A-Aj, A+Aj, -A-Aj, -A+Aj, A+Aj, -A+Aj, - A+Aj, -A+Aj, -A-Aj, -A-Aj, A+Aj, -A+Aj, A-Aj, A-Aj, A-Aj, -A+Aj, A+Aj, -A-Aj, A-Aj, A+Aj, A+Aj, -A-Aj, -A+Aj, A+Aj, A+Aj, -A-Aj, A-Aj, -A-Aj, A-Aj, A-Aj, A+Aj, -A+Aj, A-Aj, A+Aj, A-Aj, A-Aj, -A+Aj, A+Aj, A-Aj, A+Aj, -A-Aj, A-Aj, A-Aj, -A+Aj, A-Aj, -A-Aj, -A+Aj, - A+Aj, -A-Aj, -A-Aj, -A+Aj, -A-Aj, -A+Aj, A+Aj, -A-Aj, -A+Aj, A-Aj, A+Aj, A+Aj, -A-Aj, A+Aj, A-Aj, -A-Aj, -A+Aj, -A-Aj, -A-Aj, A+Aj, A+Aj |

(13) When $N_{PS}$ = 102, the pilot sequence is one item in the following Table 20-1. Alternatively, any item is selected from Table 20-2 as a pilot sequence in one polarization, and any item is selected from Table 20-3 as a pilot sequence in the other polarization. Alternatively, any item is selected from Table 20-4 as a pilot sequence in one polarization, and any item is selected from Table 20-5 as a pilot sequence in the other polarization.

**Table 20-1**

| Index | Polarization | Pilot sequence |
|---|---|---|
| 1 | Polarization 1 | A+Aj, -A+Aj, A-Aj, -A-Aj, A+Aj, A-Aj. A-Aj, A-Aj, -A+Aj, A+Aj, -A+Aj, -A-Aj, -A+Aj, A+Aj, -A-Aj, - A-Aj, -A-Aj, -A+Aj, -A-Aj, A-Aj, A-Aj. -A+Aj, -A-Aj, A-Aj, -A+Aj, A-Aj, -A+Aj, -A+Aj, A+Aj, A+Aj, A-Aj, A-Aj, -A-Aj, -A+Aj, -A-Aj, -A+Aj, -A+Aj, -A-Aj, A+Aj, -A-Aj, -A-Aj, -A+Aj, A-Aj, A-Aj, -A+Aj, -A+Aj, -A+Aj, A+Aj, -A+Aj, A-Aj, -A+Aj, -A-Aj, -A-Aj, -A+Aj, -A+Aj, -A+Aj, -A-Aj, A-Aj, A+Aj, A-Aj, A-Aj, -A+Aj, A-Aj, A-Aj, A-Aj, A-Aj, -A-Aj, -A-Aj, A+Aj, A+Aj, A-Aj, A+Aj, A+Aj, A+Aj, A+Aj, A-Aj, -A+Aj, A+Aj, -A-Aj, A+Aj, A+Aj, -A-Aj, A+Aj, -A-Aj, A+Aj, A-Aj, A+Aj, -A+Aj, A+Aj, -A-Aj, A-Aj, -A-Aj, A-Aj, -A-Aj, A+Aj, A+Aj, -A+Aj, -A-Aj, A-Aj, -A-Aj, -A+Aj, A+Aj |
| | Polarization 2 | -A-Aj, -A+Aj, -A+Aj, A-Aj, A-Aj, -A+Aj, -A-Aj, A+Aj, A+Aj, A-Aj, A-Aj, -A+Aj, A+Aj, -A-Aj, A-Aj, - A+Aj, -A-Aj, -A-Aj, -A-Aj, A+Aj, -A+Aj, A+Aj, A-Aj, A+Aj, -A+Aj, A-Aj, A-Aj, A-Aj, A+Aj, A-Aj, -A-Aj, -A-Aj, A+Aj, A-Aj, -A-Aj, A+Aj, -A-Aj, A+Aj, A+Aj, -A+Aj, -A+Aj, -A-Aj, -A-Aj, A-Aj, A+Aj, A-Aj, A+Aj, A+Aj, A-Aj, -A+Aj, A-Aj, A-Aj, A+Aj, -A-Aj, -A-Aj, A+Aj, A+Aj, A+Aj, -A+Aj, A+Aj, -A-Aj, A+Aj, A-Aj, A-Aj, A+Aj, A+Aj, A+Aj, A-Aj, -A-Aj, -A+Aj, -A-Aj, -A-Aj, A+Aj, -A-Aj, -A-Aj, -A-Aj, - A-Aj, A-Aj, A-Aj, -A+Aj, -A+Aj, -A-Aj, -A+Aj, -A+Aj, -A+Aj, -A+Aj, -A-Aj, A+Aj, -A+Aj, A-Aj, - A+Aj, -A+Aj, A-Aj, -A+Aj, A-Aj, -A+Aj, -A-Aj, -A+Aj, A+Aj, -A+Aj, A-Aj, -A-Aj |
| 2 | Polarization 1 | A+Aj, -A+Aj, A-Aj, -A-Aj, A+Aj, A-Aj. A-Aj, A-Aj, -A+Aj, A+Aj, -A+Aj, -A-Aj, -A+Aj, A+Aj, -A-Aj, - A-Aj, -A-Aj, -A+Aj, -A-Aj, A-Aj, A-Aj. -A+Aj, -A-Aj, A-Aj, -A+Aj, A-Aj, -A+Aj, -A+Aj, A+Aj, A+Aj, A-Aj, A-Aj, -A-Aj, -A+Aj, -A-Aj, -A+Aj, -A+Aj, -A-Aj, A+Aj, -A-Aj, -A-Aj, -A+Aj, A-Aj, A-Aj, -A+Aj, -A+Aj, -A+Aj, A+Aj, -A+Aj, A-Aj, -A+Aj, -A-Aj, -A-Aj, -A+Aj, -A+Aj, -A+Aj, -A-Aj, A-Aj, A+Aj, A-Aj, A-Aj, -A+Aj, A-Aj, A-Aj, A-Aj, A-Aj, -A-Aj, -A-Aj, A+Aj, A+Aj, A-Aj, A+Aj, A+Aj, A+Aj, A+Aj, A-Aj, -A+Aj, A+Aj, -A-Aj, A+Aj, A+Aj, -A-Aj, A+Aj, -A-Aj, A+Aj, A-Aj, A+Aj, -A+Aj, A+Aj, -A-Aj, A-Aj, -A-Aj, A-Aj, -A-Aj, A+Aj, A+Aj, -A+Aj, -A-Aj, A-Aj, -A-Aj, -A+Aj, A+Aj |
| | Polarization 2 | A+Aj, A+Aj, A-Aj, -A-Aj, -A+Aj, -A-Aj, -A-Aj, A+Aj, -A-Aj, -A-Aj, -A-Aj, -A-Aj, A-Aj, A-Aj, -A+Aj, - A+Aj, -A-Aj, -A+Aj, -A+Aj, -A+Aj, -A+Aj, -A-Aj, A+Aj, -A+Aj, A-Aj, -A+Aj, -A+Aj, A-Aj, -A+Aj, A-Aj, -A+Aj, -A-Aj, -A+Aj, A+Aj, -A+Aj. A-Aj, -A-Aj, A-Aj, -A-Aj, A-Aj, -A+Aj, -A+Aj, A+Aj, A-Aj, -A-Aj, A-Aj, A+Aj, -A+Aj, -A-Aj, A-Aj, -A+Aj, A+Aj, A+Aj, -A+Aj, -A-Aj, A+Aj, A-Aj, -A+Aj, -A-Aj, A-Aj, -A-Aj, -A-Aj, -A+Aj, A-Aj, A+Aj, A+Aj, -A+Aj, A-Aj, A+Aj, -A+Aj, -A+Aj, -A+Aj, A+Aj, -A-Aj, - A-Aj, -A+Aj, A+Aj, -A-Aj, -A+Aj, A-Aj, -A+Aj, A+Aj, A-Aj, A-Aj, A-Aj, -A-Aj, -A+Aj, -A+Aj, A+Aj, - A+Aj, A+Aj, A+Aj, -A-Aj, A+Aj, -A+Aj, -A+Aj, A-Aj, -A-Aj, -A+Aj, A+Aj, A+Aj, A-Aj |
| 3 | Polarization 1 | -A-Aj, -A+Aj, A+Aj, A-Aj, A+Aj, -A+Aj, -A-Aj, -A-Aj, A+Aj, A-Aj, A+Aj, A-Aj, A+Aj, -A-Aj, -A+Aj, - A-Aj, A-Aj, -A-Aj, A+Aj, -A-Aj, A+Aj, -A-Aj, -A-Aj, A+Aj, -A-Aj, -A+Aj, A-Aj, -A-Aj, -A-Aj, - A-Aj, A-Aj, A-Aj, -A-Aj, -A-Aj, A+Aj, A+Aj, A-Aj, A-Aj, A-Aj, A-Aj, -A+Aj, A-Aj, A-Aj, -A-Aj, A-Aj, A+Aj, - A+Aj, -A+Aj, -A+Aj, A+Aj, A+Aj, -A+Aj, A-Aj, -A+Aj, -A-Aj, -A+Aj, -A+Aj, -A+Aj, A-Aj, A-Aj, - A+Aj, A+Aj, A+Aj, -A-Aj, A+Aj, -A+Aj, -A+Aj, A+Aj, -A+Aj, A+Aj, A-Aj, A-Aj, -A-Aj, -A-Aj, -A+Aj, - A+Aj, A-Aj, -A+Aj, A-Aj, A+Aj, -A+Aj, A-Aj, A-Aj, A+Aj, -A+Aj, A+Aj, A+Aj, A+Aj, -A-Aj, -A+Aj, A+Aj, -A+Aj, -A-Aj, -A+Aj, A-Aj, A-Aj, A-Aj, -A-Aj, A+Aj, A-Aj, -A+Aj, -A-Aj |
| | Polarization 2 | -A+Aj, -A-Aj, A-Aj, A+Aj, A-Aj, -A-Aj, -A+Aj, -A+Aj, A-Aj, A+Aj, A-Aj, A+Aj, A-Aj, -A+Aj, -A-Aj, - A+Aj, A+Aj, -A+Aj, A-Aj, -A+Aj, A-Aj, -A+Aj, -A+Aj, A-Aj, -A+Aj, -A-Aj, A+Aj, -A+Aj, -A+Aj, - A+Aj, A+Aj, -A+Aj, A+Aj, -A+Aj, -A+Aj, A-Aj, A-Aj, A+Aj, A+Aj, A+Aj, A+Aj, -A-Aj, A+Aj, A+Aj, -A+Aj, A+Aj, A-Aj, -A-Aj, -A-Aj, -A-Aj, A-Aj. A-Aj, -A-Aj, A+Aj, -A-Aj, -A+Aj, -A-Aj, -A-Aj, -A-Aj, A+Aj, A+Aj, -A-Aj, A-Aj, A-Aj, -A+Aj, A-Aj, -A-Aj, -A-Aj, A-Aj, -A-Aj, A-Aj, A+Aj, A+Aj, -A+Aj, -A+Aj, - A-Aj, -A-Aj, A+Aj, -A-Aj, A+Aj, A-Aj, -A-Aj, A+Aj, A+Aj, A-Aj, -A-Aj, A-Aj, A-Aj, A-Aj, A-Aj, -A+Aj, -A-Aj, A-Aj, -A-Aj, -A+Aj, -A-Aj, A+Aj, A+Aj, A+Aj, -A+Aj, A-Aj, A+Aj, -A-Aj, -A+Aj |

(continued)

| Index | Polarization | Pilot sequence |
|---|---|---|
| 4 | Polarization 1 | -A-Aj, -A+Aj, A+Aj, A-Aj, A+Aj, -A+Aj, -A-Aj, -A-Aj, A+Aj, A-Aj, A+Aj, A-Aj, A+Aj, -A-Aj, -A+Aj, - A-Aj, A-Aj, -A-Aj, A+Aj, -A-Aj, A+Aj, -A-Aj, -A-Aj, A+Aj, -A-Aj, -A+Aj, A-Aj, -A-Aj, -A-Aj, -A-Aj, - A-Aj, A-Aj, -A-Aj, -A-Aj, A+Aj, A+Aj, A-Aj, A-Aj, A-Aj, A-Aj, -A+Aj, A-Aj, A-Aj, -A-Aj, A-Aj, A+Aj, -A+Aj, -A+Aj, -A+Aj, A+Aj, A+Aj, -A+Aj, A-Aj, -A+Aj, -A-Aj, -A+Aj, -A+Aj, -A+Aj, A-Aj, A-Aj, - A+Aj, A+Aj, A+Aj, -A-Aj, A+Aj, -A+Aj, -A+Aj, A+Aj, -A+Aj, A+Aj, A-Aj, A-Aj, -A-Aj, -A-Aj, -A+Aj, - A+Aj, A-Aj, -A+Aj, A-Aj, A+Aj, -A+Aj, A-Aj, A-Aj, A+Aj, -A+Aj, A+Aj, A+Aj, A+Aj, -A-Aj, -A+Aj, A+Aj, -A+Aj, -A-Aj, -A+Aj, A-Aj, A-Aj, A-Aj, -A-Aj, A+Aj, A-Aj, -A+Aj, -A-Aj |
| | Polarization 2 | A-Aj, A+Aj, -A+Aj, -A-Aj, -A+Aj, A+Aj, A-Aj, A-Aj, -A+Aj, -A-Aj, -A+Aj, -A-Aj, -A+Aj, A-Aj, A+Aj, A-Aj, -A-Aj, A-Aj, -A+Aj, A-Aj, -A+Aj, A-Aj, A-Aj, -A+Aj, A-Aj, A+Aj, -A-Aj, A-Aj, A-Aj, A-Aj, A-Aj, -A-Aj, A-Aj, A-Aj, -A+Aj, -A+Aj, -A-Aj, -A-Aj, -A-Aj, -A-Aj, A+Aj, -A-Aj, -A-Aj, A-Aj, -A-Aj, -A+Aj, A+Aj, A+Aj, A+Aj, -A+Aj, -A+Aj, A+Aj, -A-Aj, A+Aj, A-Aj, A+Aj, A+Aj, A+Aj, -A-Aj, -A-Aj, A+Aj, - A+Aj, -A+Aj, A-Aj, -A+Aj, A+Aj, A+Aj, -A+Aj, A+Aj, -A+Aj, -A-Aj, -A-Aj, A-Aj, A-Aj, A+Aj, A+Aj, - A-Aj, A+Aj, -A-Aj, -A+Aj, A+Aj, -A-Aj, -A-Aj, -A+Aj, A+Aj, -A+Aj, -A+Aj, -A+Aj, A-Aj, A+Aj, - A+Aj, A+Aj, A-Aj, A+Aj, -A-Aj, -A-Aj. -A-Aj, A-Aj, -A+Aj, -A-Aj, A+Aj, A-Aj |
| 5 | Polarization 1 | -A-Aj, -A+Aj, A+Aj, A-Aj, A+Aj, -A+Aj, -A-Aj, -A-Aj, A+Aj, A-Aj, A+Aj, A-Aj, A+Aj, -A-Aj, -A+Aj, - A-Aj, A-Aj, -A-Aj, A+Aj, -A-Aj, A+Aj, -A-Aj, -A-Aj, A+Aj, -A-Aj, -A+Aj, A-Aj, -A-Aj, -A-Aj, A-Aj, -A-Aj, - A-Aj, A-Aj, -A-Aj, -A-Aj, A+Aj, A+Aj, A-Aj, A-Aj, A-Aj, A-Aj, -A+Aj, A-Aj, A-Aj, -A-Aj, A-Aj, A+Aj, - A+Aj, -A+Aj, -A+Aj, A+Aj, A+Aj, -A+Aj, A-Aj, -A+Aj, -A-Aj, -A+Aj, -A+Aj, -A+Aj, A-Aj, A-Aj, - A+Aj, A+Aj, A+Aj, -A-Aj, A+Aj, -A+Aj, -A+Aj, A+Aj, -A+Aj, A+Aj, A-Aj, A-Aj, -A-Aj, -A-Aj, -A+Aj, - A+Aj, A-Aj, -A+Aj, A-Aj, A+Aj, -A+Aj, A-Aj, A+Aj, -A+Aj, A-Aj, A-Aj, A+Aj, -A+Aj, A+Aj, A+Aj, A+Aj, -A-Aj, -A+Aj, A+Aj, -A+Aj, -A-Aj, -A+Aj, A-Aj, A-Aj, A-Aj, -A-Aj, A+Aj, A-Aj, -A+Aj, -A-Aj |
| | Polarization 2 | A+Aj, A-Aj, -A+Aj, -A-Aj, -A+Aj, A+Aj, -A+Aj, A-Aj, -A+Aj, A-Aj, -A+Aj, -A+Aj, A-Aj, -A+Aj, -A-Aj, A+Aj, -A+Aj, -A+Aj, -A+Aj, -A+Aj, A+Aj, -A+Aj, -A+Aj, A-Aj, A-Aj, A+Aj, A+Aj, A+Aj, A+Aj, -A-Aj, A+Aj, A+Aj, -A+Aj, A+Aj, A-Aj, -A-Aj, -A-Aj, -A-Aj, A-Aj, A-Aj, -A-Aj, A+Aj, -A-Aj, -A+Aj, -A-Aj, - A-Aj, -A-Aj, A+Aj, A+Aj, -A-Aj, A-Aj, A-Aj, -A+Aj, A-Aj, -A-Aj, -A-Aj, A-Aj, -A- Aj, A-Aj, A+Aj, A+Aj, -A+Aj, -A+Aj, -A-Aj, -A-Aj, A+Aj, -A-Aj, A+Aj, A-Aj, -A-Aj, A+Aj, A+Aj, A-Aj, -A-Aj, A-Aj, A-Aj, A-Aj, -A+Aj, -A-Aj, A-Aj, -A-Aj, -A+Aj, -A-Aj, A+Aj, A+Aj, A+Aj, -A+Aj, A-Aj, A+Aj, -A-Aj, - A+Aj, A-Aj, A-Aj, -A-Aj, -A-Aj, A+Aj, -A+Aj, A-Aj, A-Aj, -A+Aj, -A+Aj, A+Aj |
| 6 | Polarization 1 | A-Aj, A+Aj, A-Aj, A+Aj, -A-Aj, A-Aj, -A-Aj, A-Aj, -A-Aj, -A+Aj, A-Aj, -A-Aj, A-Aj, -A+Aj, -A+Aj, - A+Aj, -A+Aj, A+Aj, -A-Aj, -A-Aj, -A-Aj, A+Aj, -A+Aj, -A+Aj, A+Aj, A+Aj, A+Aj, A+Aj, A-Aj, A+Aj, A-Aj, A-Aj, -A-Aj, -A+Aj, -A+Aj, A+Aj, -A+Aj, -A-Aj, A+Aj, A-Aj, -A-Aj, -A-Aj, A-Aj, A-Aj, -A+Aj, - A+Aj, A+Aj, -A-Aj, -A+Aj, A-Aj, A-Aj. A-Aj, -A+Aj, A-Aj, -A-Aj, A+Aj, -A-Aj, -A-Aj, -A+Aj, A+Aj, A-Aj, -A-Aj, A-Aj, A-Aj, A-Aj, A-Aj, -A-Aj, -A+Aj, A+Aj, -A+Aj, A+Aj, -A+Aj, A+Aj, -A-Aj, -A+Aj, - A+Aj, A-Aj, -A+Aj, A+Aj, A-Aj, A+Aj, -A+Aj, -A+Aj, A+Aj, -A-Aj, A+Aj, -A-Aj, -A-Aj, A+Aj, A+Aj, - A-Aj, -A+Aj, A-Aj, -A-Aj, A+Aj, A+Aj. -A-Aj, A-Aj, -A+Aj, A-Aj, A+Aj, -A-Aj |
| | Polarization 2 | A+Aj, -A-Aj, A-Aj, -A-Aj, A+Aj, A-Aj, -A-Aj, -A+Aj, -A-Aj, A+Aj, A-Aj, -A+Aj, A-Aj, A+Aj, -A+Aj, - A+Aj, -A-Aj, -A-Aj, -A-Aj, A-Aj, -A-Aj, -A-Aj, A+Aj, -A+Aj, A-Aj, A+Aj, -A-Aj, -A+Aj, A+Aj, -A+Aj, - A+Aj, A+Aj, -A+Aj, -A+Aj, -A+Aj, A+Aj, A+Aj, -A-Aj, A+Aj, -A+Aj, -A+Aj, A-Aj, -A+Aj, A-Aj, -A-Aj, A-Aj, A-Aj, -A+Aj, A-Aj, A+Aj, A+Aj, A+Aj, A-Aj, -A+Aj, -A-Aj, -A-Aj, -A+Aj, -A+Aj, A+Aj, A-Aj, - A-Aj, -A-Aj, -A-Aj, -A-Aj, A+Aj, -A-Aj, A+Aj, A-Aj, -A-Aj, A+Aj, A- Aj, -A+Aj, A+Aj, -A+Aj, -A-Aj, A-Aj, -A-Aj, -A+Aj, A+Aj, A-Aj, A+Aj. A-Aj, -A+Aj, -A-Aj, A-Aj, A+Aj, A+Aj, A-Aj, A-Aj, A-Aj, - A+Aj, -A+Aj, -A-Aj, -A-Aj, A-Aj, -A-Aj, A-Aj, -A+Aj, A+Aj, A+Aj, A+Aj, A-Aj |

(continued)

| Index | Polarization | Pilot sequence |
|---|---|---|
| 7 | Polarization 1 | -A-Aj, A+Aj, -A+Aj, A-Aj, -A+Aj, -A-Aj, A+Aj, A+Aj, -A-Aj, -A+Aj, A-Aj, -A-Aj, A-Aj, A+Aj, -A-Aj, -A-Aj, A+Aj, -A-Aj, A+Aj, A-Aj, A-Aj, A+Aj, -A+Aj, A+Aj, A-Aj, -A+Aj, A-Aj, A-Aj, -A-Aj, A+Aj, A-Aj, A+Aj, A-Aj, A+Aj, A-Aj, -A-Aj, -A+Aj. -A+Aj, -A+Aj, -A+Aj, -A-Aj, -A+Aj, A+Aj, A-Aj, -A-Aj, -A-Aj, A+Aj, -A-Aj, -A+Aj, A-Aj, -A+Aj, -A+Aj, -A+Aj, A-Aj, -A-Aj, A+Aj, A-Aj, A-Aj, -A+Aj, -A+Aj, -A-Aj, -A-Aj, -A+Aj, A+Aj, -A-Aj, A-Aj, A+Aj, A-Aj, A-Aj, -A-Aj, -A+Aj, -A+Aj, A+Aj, -A+Aj, A+Aj, A+Aj, A+Aj, A+Aj, A-Aj, A-Aj, A+Aj, -A-Aj, -A-Aj, -A-Aj, A+Aj, A-Aj, A-Aj, A-Aj, A-Aj, -A+Aj, -A-Aj, - A+Aj, A-Aj, -A-Aj, -A+Aj, -A-Aj, -A+Aj, -A-Aj, A+Aj, -A+Aj, A+Aj, -A+Aj |
| | Polarization 2 | -A+Aj, A+Aj, A+Aj, A+Aj, A-Aj, -A+Aj, -A-Aj, -A+Aj, -A-Aj, -A-Aj, A-Aj, A-Aj, -A+Aj, -A+Aj, -A+Aj, A+Aj, A+Aj, -A+Aj, -A-Aj, A-Aj, -A+Aj, A+Aj, -A+Aj, A+Aj, A-Aj, -A-Aj, -A+Aj, -A-Aj, A-Aj, A+Aj, A-Aj, -A+Aj, A+Aj, -A-Aj, -A+Aj, A+Aj, -A-Aj, A+Aj, -A-Aj, -A-Aj, -A-Aj, -A-Aj, -A+Aj, A+Aj, A-Aj, A-Aj, -A-Aj, -A-Aj, A-Aj, -A+Aj, A+Aj, A+Aj, A+Aj, -A+Aj, A-Aj, -A+Aj, -A+Aj, -A-Aj, -A+Aj, A-Aj, - A+Aj, A-Aj, A-Aj, A+Aj, -A-Aj, A+Aj, A+Aj, A-Aj, A-Aj, A-Aj, A+Aj, A-Aj, A-Aj, A+Aj, A-Aj, -A-Aj, A+Aj, -A+Aj, A-Aj, A+Aj, -A-Aj, -A-Aj, -A+Aj, -A-Aj, -A-Aj, -A-Aj, A-Aj, A-Aj, A+Aj, -A+Aj, A-Aj, - A+Aj, A+Aj, -A-Aj, A-Aj, -A-Aj, -A+Aj, A+Aj, -A-Aj, -A+Aj, -A-Aj, A+Aj |

**Table 20-2**

| Index | Pilot sequence |
|---|---|
| 1 | -A-Aj, A-Aj, -A+Aj, A+Aj, -A-Aj, -A+Aj, -A+Aj, -A+Aj, A-Aj, -A-Aj, A-Aj, A+Aj, A-Aj, -A-Aj, A+Aj, A+Aj, A+Aj, A-Aj, A+Aj, -A+Aj, -A+Aj, A-Aj, A+Aj, -A+Aj, A-Aj, -A+Aj, A-Aj, A-Aj, -A-Aj, -A-Aj, -A+Aj, -A+Aj, A+Aj, A-Aj, A+Aj, A-Aj, A-Aj, A+Aj, -A-Aj, A+Aj, A+Aj, A-Aj, -A+Aj, -A+Aj, A-Aj, A-Aj, A-Aj, -A-Aj, A-Aj, - A+Aj, A-Aj, A+Aj, A+Aj, A-Aj, A-Aj, A-Aj, A+Aj, -A+Aj, -A-Aj, -A+Aj, -A+Aj, A-Aj, -A+Aj, -A+Aj, -A+Aj, - A+Aj, A+Aj, A+Aj, -A-Aj, -A-Aj, -A+Aj, -A-Aj, -A-Aj, -A-Aj, -A-Aj, -A+Aj, A-Aj, -A-Aj, A+Aj, -A-Aj, -A-Aj, A+Aj, -A-Aj, A+Aj, -A-Aj, -A+Aj, -A-Aj, A-Aj, -A-Aj, A+Aj, -A+Aj, A+Aj, -A+Aj, A+Aj, -A-Aj, -A-Aj, A-Aj, A+Aj, -A+Aj, A+Aj, A-Aj, -A-Aj |
| 2 | -A+Aj, -A-Aj, -A-Aj, A+Aj, A+Aj, -A-Aj, -A+Aj, A-Aj, A-Aj, A+Aj, A+Aj, -A-Aj, A-Aj, -A+Aj, A+Aj, -A-Aj, - A+Aj, -A+Aj, -A+Aj, A-Aj, -A-Aj, A-Aj, A+Aj, A-Aj, -A-Aj, A+Aj, A+Aj, A+Aj, A-Aj, A+Aj, -A+Aj, -A+Aj, A-Aj, A+Aj, -A+Aj, A-Aj, -A+Aj, A-Aj, A-Aj, -A-Aj, -A-Aj, -A+Aj, -A+Aj, A+Aj, A-Aj, A+Aj, A-Aj, A-Aj, A+Aj, -A-Aj, A+Aj, A+Aj, A-Aj, -A+Aj, -A+Aj, A-Aj, A-Aj, A-Aj, -A-Aj, A-Aj, -A+Aj, A-Aj, A+Aj, A+Aj, A-Aj, A-Aj, A-Aj, A+Aj, -A+Aj, -A-Aj, -A+Aj, -A+Aj, A-Aj, -A+Aj, -A+Aj, -A+Aj, -A+Aj, A+Aj, A+Aj, -A-Aj, -A-Aj, -A+Aj, -A-Aj, -A-Aj, -A-Aj, -A-Aj, -A+Aj, A-Aj, -A-Aj, A+Aj, -A-Aj, -A-Aj, A+Aj, -A-Aj, A+Aj, -A-Aj, -A+Aj, -A-Aj, A-Aj, -A-Aj, A+Aj, -A+Aj |
| 3 | A-Aj, A+Aj, A+Aj, -A-Aj, -A-Aj, A+Aj, A-Aj, -A+Aj, -A+Aj, -A-Aj, -A-Aj, A+Aj, -A+Aj, A-Aj, -A-Aj, A+Aj, A-Aj, A-Aj, A-Aj, -A+Aj, A+Aj, -A+Aj, -A-Aj, -A+Aj, A+Aj, -A-Aj, -A-Aj, -A-Aj, -A+Aj, -A-Aj, A-Aj, A-Aj, -A+Aj, -A-Aj, A-Aj, -A+Aj, A-Aj, -A+Aj, -A+Aj, A+Aj, A+Aj, A-Aj, A-Aj, -A-Aj, -A+Aj, -A-Aj, -A+Aj, -A+Aj, -A-Aj, A+Aj, -A-Aj, -A-Aj, -A+Aj, A-Aj, A-Aj, -A+Aj, -A+Aj, -A+Aj, A+Aj, -A+Aj, A-Aj, -A+Aj, -A-Aj, -A-Aj, -A+Aj, - A+Aj, -A+Aj, -A-Aj, A-Aj, A+Aj, A-Aj, A-Aj, -A+Aj, A-Aj, A-Aj, A-Aj, A-Aj, -A-Aj, -A-Aj, A+Aj, A+Aj, A-Aj, A+Aj, A+Aj, A+Aj, A+Aj, A-Aj, -A+Aj, A+Aj, -A-Aj, A+Aj, A+Aj, -A-Aj, A+Aj, -A-Aj, A+Aj, A-Aj, A+Aj, -A+Aj, A+Aj, -A-Aj, A-Aj |

**Table 20-3**

| Index | Pilot sequence |
|---|---|
| 1 | -A-Aj, -A+Aj, -A+Aj, A-Aj, A-Aj, -A+Aj, -A-Aj, A+Aj, A+Aj, A-Aj, A-Aj, -A+Aj, A+Aj, -A-Aj, A-Aj, -A+Aj, - A-Aj, -A-Aj, -A-Aj, A+Aj, -A+Aj, A+Aj, A-Aj, A+Aj, -A+Aj, A-Aj, A-Aj, A-Aj, A+Aj, A-Aj, -A-Aj, -A-Aj, A+Aj, A-Aj, -A-Aj, A+Aj, -A-Aj, A+Aj, A+Aj, -A+Aj, -A+Aj, -A-Aj, -A-Aj, A-Aj, A+Aj, A-Aj, A+Aj, A+Aj, A-Aj, -A+Aj, A-Aj, A-Aj, A+Aj, -A-Aj, -A-Aj, A+Aj, A+Aj, A+Aj, -A+Aj, A+Aj, -A-Aj, A+Aj, A-Aj, A-Aj, A+Aj, A+Aj, A+Aj, A-Aj, -A-Aj, -A+Aj, -A-Aj, -A-Aj, A+Aj, -A-Aj, -A-Aj, -A-Aj, -A-Aj, A-Aj, A-Aj, -A+Aj, -A+Aj, - A-Aj, -A+Aj, -A+Aj, -A+Aj, -A+Aj, -A-Aj, A+Aj, -A+Aj, A-Aj, -A+Aj, -A+Aj, A-Aj, -A+Aj, A-Aj, -A+Aj, -A-Aj, -A+Aj, A+Aj, -A+Aj, A-Aj, -A-Aj |

(continued)

| Index | Pilot sequence |
|---|---|
| 2 | -A+Aj, A+Aj, -A-Aj, A-Aj, -A+Aj, -A-Aj, -A-Aj, -A-Aj, A+Aj, -A+Aj, A+Aj, A-Aj, A+Aj, -A+Aj, A-Aj, A-Aj, A-Aj, A+Aj, A-Aj, -A-Aj, -A-Aj, A+Aj, A-Aj, -A-Aj, A+Aj, -A-Aj, A+Aj, A+Aj, -A+Aj, -A+Aj, -A-Aj, -A-Aj, A-Aj, A+Aj, A-Aj, A+Aj, A+Aj, A-Aj, -A+Aj, A-Aj, A-Aj, A+Aj, -A-Aj, -A-Aj, A+Aj, A+Aj, A+Aj, -A+Aj, A+Aj, -A-Aj, A+Aj, A-Aj, A-Aj, A+Aj, A+Aj, A+Aj, A-Aj, -A-Aj, -A+Aj, -A-Aj, -A-Aj, A+Aj, -A-Aj, -A-Aj, - A-Aj, -A-Aj, A-Aj, A-Aj, -A+Aj, -A+Aj, -A-Aj, -A+Aj, -A+Aj, -A+Aj, -A+Aj, -A-Aj, A+Aj, -A+Aj, A-Aj, - A+Aj, -A+Aj, A-Aj, -A+Aj, A-Aj, -A+Aj, -A-Aj, -A+Aj, A+Aj, -A+Aj, A-Aj, -A-Aj, A-Aj, -A-Aj, A-Aj, -A+Aj, -A+Aj, A+Aj, A-Aj, -A-Aj, A-Aj, A+Aj, -A+Aj |
| 3 | A-Aj, -A-Aj, A+Aj, -A+Aj, A-Aj, A+Aj, A+Aj, A+Aj, -A-Aj, A-Aj, -A-Aj, -A+Aj, -A-Aj, A-Aj, -A+Aj, -A+Aj, - A+Aj, -A-Aj, -A+Aj, A+Aj, A+Aj, -A-Aj, -A+Aj, A+Aj, -A-Aj, A+Aj, -A-Aj, -A-Aj, A-Aj, A-Aj, A+Aj, A+Aj, - A+Aj, -A-Aj, -A+Aj, -A-Aj, -A-Aj, -A+Aj, A-Aj, -A+Aj, -A+Aj, -A-Aj, A+Aj, A+Aj, -A-Aj, -A-Aj, -A-Aj, A-Aj, -A-Aj, A+Aj, -A-Aj, -A+Aj, -A+Aj, -A-Aj, -A-Aj, -A-Aj, -A+Aj, A+Aj, A-Aj, A+Aj, A+Aj, -A-Aj, A+Aj, A+Aj, A+Aj, A+Aj, -A+Aj, -A+Aj, A-Aj, A-Aj, A+Aj, A-Aj, A-Aj, A-Aj, A-Aj, A+Aj, -A-Aj, A-Aj, -A+Aj, A-Aj, A-Aj, -A+Aj, A-Aj, -A+Aj, A-Aj, A+Aj, A-Aj, -A-Aj, A-Aj, -A+Aj, A+Aj, -A+Aj, A+Aj, -A+Aj, A-Aj, A-Aj, -A-Aj, -A+Aj, A+Aj, -A+Aj, -A-Aj, A-Aj |
| 4 | A+Aj, A-Aj, A-Aj, -A+Aj, -A+Aj, A-Aj, A+Aj, -A-Aj, -A-Aj, -A+Aj, -A+Aj, A-Aj, -A-Aj, A+Aj, -A+Aj, A-Aj, A+Aj, A+Aj, A+Aj, -A-Aj, A-Aj, -A-Aj, -A+Aj, -A-Aj, A-Aj, -A+Aj, -A+Aj, -A+Aj, -A-Aj, -A+Aj, A+Aj, A+Aj, -A-Aj, -A+Aj, A+Aj, -A-Aj, A+Aj, -A-Aj, -A-Aj, A-Aj, A-Aj, A+Aj, A+Aj, -A+Aj, -A-Aj, -A+Aj, -A-Aj, -A-Aj, -A+Aj, A-Aj, -A+Aj, -A+Aj, -A-Aj, A+Aj, A+Aj, -A-Aj, -A-Aj, -A-Aj, A-Aj, -A-Aj, A+Aj, -A-Aj, -A+Aj, - A+Aj, -A-Aj, -A-Aj, -A-Aj, -A+Aj, A+Aj, A-Aj, A+Aj, A+Aj, -A-Aj, A+Aj, A+Aj, A+Aj, A+Aj, -A+Aj, -A+Aj, A-Aj, A-Aj, A+Aj, A-Aj, A-Aj, A-Aj, A-Aj, A+Aj, -A-Aj, A-Aj, -A+Aj, A-Aj, A-Aj, -A+Aj, A-Aj, -A+Aj, A-Aj, A+Aj, A-Aj, -A-Aj, A-Aj, -A+Aj, A+Aj |

**Table 20-4**

| Index | Pilot sequence |
|---|---|
| 1 | -A+Aj, -A-Aj, A+Aj, A-Aj, A+Aj, -A+Aj, A+Aj, -A-Aj, A+Aj, -A-Aj, A+Aj, A+Aj, -A-Aj, A+Aj, A-Aj, -A+Aj, A+Aj, A+Aj, A+Aj, A+Aj, -A+Aj, A+Aj, A+Aj, -A-Aj, -A-Aj, -A+Aj, -A+Aj, -A+Aj, -A+Aj, A-Aj, -A+Aj, -A+Aj, A+Aj, -A+Aj, -A-Aj, A-Aj, A-Aj, A-Aj, -A-Aj, -A-Aj, A-Aj, -A+Aj, A-Aj, A+Aj, A-Aj, A-Aj, A-Aj, -A+Aj, -A+Aj, A-Aj, -A-Aj, -A-Aj, A+Aj, -A-Aj, A-Aj, A-Aj, -A-Aj, A-Aj, -A-Aj, -A+Aj, -A+Aj, A+Aj, A+Aj, A-Aj, A-Aj, -A+Aj, A-Aj, -A+Aj, -A-Aj, A-Aj, -A+Aj, -A+Aj, -A-Aj, A-Aj, -A-Aj, -A-Aj, -A-Aj, A+Aj, A-Aj, -A-Aj, A-Aj, A+Aj, A-Aj, -A+Aj, -A+Aj, -A+Aj, A+Aj, -A-Aj, -A+Aj, A-Aj, A+Aj, -A-Aj, -A-Aj, A-Aj, A-Aj, -A+Aj, A+Aj, -A-Aj, -A-Aj, A+Aj, A+Aj, -A+Aj |
| 2 | A-Aj, A+Aj, -A-Aj, -A+Aj, -A-Aj, A-Aj, -A-Aj, A+Aj, -A-Aj, A+Aj, -A-Aj, -A-Aj, A+Aj, -A-Aj, -A+Aj, A-Aj, -A-Aj, -A-Aj, -A-Aj, -A-Aj, A-Aj, -A-Aj, -A-Aj, A+Aj, A+Aj, A-Aj, A-Aj, A-Aj, A-Aj, -A+Aj, A-Aj, A-Aj, -A-Aj, A-Aj, A+Aj, -A+Aj, -A+Aj, -A+Aj, A+Aj, A+Aj, -A+Aj, A-Aj, -A+Aj, -A-Aj, -A+Aj, A+Aj, -A+Aj, A-Aj, A-Aj, - A+Aj, A+Aj, A+Aj, -A-Aj, A+Aj, -A+Aj, -A+Aj, A+Aj, -A+Aj, A+Aj, A-Aj, A-Aj, -A-Aj, -A-Aj, -A+Aj, -A+Aj, A-Aj, -A+Aj, A-Aj, A+Aj, -A+Aj, A-Aj, A-Aj, A-Aj, -A-Aj, A+Aj, A-Aj, -A+Aj, -A-Aj, A+Aj, A+Aj, -A+Aj, -A+Aj, A-Aj, -A-Aj, A+Aj, A+Aj, -A-Aj, -A-Aj, A-Aj |
| 3 | A+Aj, A-Aj, -A-Aj, -A+Aj, -A-Aj, A-Aj, A+Aj, A+Aj, -A-Aj, -A+Aj, -A-Aj, -A+Aj, -A-Aj, A+Aj, A-Aj, A+Aj, - A+Aj, A+Aj, -A-Aj, A+Aj, -A-Aj, A+Aj, A+Aj, -A-Aj, A+Aj, A-Aj, -A+Aj, A+Aj, A+Aj, A+Aj, A+Aj, -A+Aj, A+Aj, A+Aj, -A-Aj, -A-Aj, -A+Aj, -A+Aj, -A+Aj, -A+Aj, A-Aj, -A+Aj, -A+Aj, A+Aj, -A+Aj, -A-Aj, A-Aj, A-Aj, A-Aj, -A-Aj, -A- Aj, A-Aj, -A+Aj, A-Aj, A+Aj, A-Aj, A-Aj, A-Aj, -A+Aj, -A+Aj, A-Aj, -A-Aj, -A-Aj, A+Aj, -A-Aj, A-Aj, A-Aj, -A-Aj, A-Aj, -A-Aj, -A+Aj, -A+Aj, A+Aj, A+Aj, A-Aj, A-Aj, -A+Aj, A-Aj, -A+Aj, -A-Aj, A-Aj, -A+Aj, -A+Aj, -A-Aj, A-Aj, -A-Aj, -A-Aj, -A-Aj, A+Aj, A-Aj, -A-Aj, A-Aj, A+Aj, A-Aj, -A+Aj, -A+Aj, -A+Aj, A+Aj, -A-Aj, -A+Aj, A-Aj, A+Aj |

**Table 20-5**

| Index | Pilot sequence |
|---|---|
| 1 | -A-Aj, -A+Aj, A-Aj, A+Aj, A-Aj, -A-Aj, A-Aj, -A+Aj, A-Aj, -A+Aj, A-Aj, A-Aj, -A+Aj, A-Aj, A+Aj, -A-Aj, A-Aj, A-Aj, A-Aj, A-Aj, -A-Aj, A-Aj, A-Aj, -A+Aj, -A+Aj, -A-Aj, -A-Aj, -A-Aj, -A-Aj, A+Aj, -A-Aj, -A-Aj, A-Aj, -A-Aj, -A+Aj, A+Aj, A+Aj, A+Aj, -A+Aj, -A+Aj, A+Aj, -A-Aj, A+Aj, A-Aj, A+Aj, A+Aj, A+Aj, -A-Aj, -A-Aj, A+Aj, -A+Aj, -A+Aj, A-Aj, -A+Aj, A+Aj, A+Aj, -A+Aj, A+Aj, -A+Aj, -A-Aj, -A-Aj, A-Aj, A-Aj, A+Aj, A+Aj, -A-Aj, A+Aj, -A-Aj, -A+Aj, A+Aj, -A-Aj, -A-Aj, -A+Aj, A+Aj, -A+Aj, -A+Aj, -A+Aj, A-Aj, A+Aj, -A+Aj, A+Aj, A-Aj, A+Aj, -A-Aj, -A-Aj, -A-Aj, A-Aj, -A+Aj, -A-Aj, A+Aj, A-Aj, -A+Aj, -A+Aj, A+Aj, A+Aj, -A-Aj, A-Aj, -A+Aj, - A+Aj, A-Aj, A-Aj, -A-Aj |
| 2 | -A+Aj, -A-Aj, A-Aj, A+Aj, A-Aj, -A-Aj, -A+Aj, -A+Aj, A-Aj, A+Aj, A-Aj, A+Aj, A-Aj, -A+Aj, -A-Aj, -A+Aj, A+Aj, -A+Aj, A-Aj, -A+Aj, A-Aj, -A+Aj, -A+Aj, A-Aj, -A+Aj, -A-Aj, A+Aj, -A+Aj, -A+Aj, -A+Aj, -A+Aj, A+Aj, - A+Aj, -A+Aj, A-Aj, A-Aj, A+Aj, A+Aj, A+Aj, A+Aj, -A-Aj, A+Aj, A+Aj, -A+Aj, A+Aj, A-Aj, -A-Aj, -A-Aj, -A-Aj, A-Aj, A-Aj, -A-Aj, A+Aj, -A-Aj, -A+Aj, -A-Aj, -A-Aj, -A-Aj, A+Aj, A+Aj, -A-Aj, A-Aj, A-Aj, -A+Aj, A-Aj, -A-Aj, -A-Aj, A-Aj, -A-Aj, A-Aj, A+Aj, A+Aj, -A+Aj, -A+Aj, -A-Aj, -A-Aj, A+Aj, -A-Aj, A+Aj, A-Aj, -A-Aj, A+Aj, A+Aj, A-Aj, -A-Aj, A-Aj, A-Aj, A-Aj, A-Aj, -A+Aj, -A-Aj, A-Aj, -A-Aj, -A+Aj, -A-Aj, A+Aj, A+Aj, A+Aj, -A+Aj, A-Aj, A+Aj, -A-Aj, -A+Aj |
| 3 | A-Aj, A+Aj, -A+Aj, -A-Aj, -A+Aj, A+Aj, A-Aj, A-Aj, -A+Aj, -A-Aj, -A+Aj, -A-Aj, -A+Aj, A-Aj, A+Aj, A-Aj, -A-Aj, A-Aj, -A+Aj, A-Aj, -A+Aj, A-Aj, A-Aj, -A+Aj, A-Aj, A+Aj, -A-Aj, A-Aj, A-Aj, A-Aj, A-Aj, -A-Aj, A-Aj, A-Aj, -A+Aj, -A+Aj, -A-Aj, -A-Aj, -A-Aj, -A-Aj, A+Aj, -A-Aj, -A-Aj, A-Aj, -A-Aj, -A+Aj, A+Aj, A+Aj, A+Aj, -A+Aj, - A+Aj, A+Aj, -A-Aj, A+Aj, A-Aj, A+Aj, A+Aj, A+Aj, -A-Aj, -A-Aj, A+Aj, -A+Aj, -A+Aj, A-Aj, -A+Aj, A+Aj, A+Aj, -A+Aj, A+Aj, -A+Aj, -A-Aj, -A-Aj, A-Aj, A-Aj, A+Aj, A+Aj, -A-Aj, A+Aj, -A-Aj, -A+Aj, A+Aj, -A-Aj, -A-Aj, -A+Aj, A+Aj, -A+Aj, -A+Aj, -A+Aj, A-Aj, A+Aj, -A+Aj, A+Aj, A-Aj, A+Aj, -A-Aj, -A-Aj, -A-Aj, A-Aj, -A+Aj, -A-Aj, A+Aj, A-Aj |
| 4 | A+Aj, A-Aj, -A+Aj, -A-Aj, -A+Aj, A+Aj, -A+Aj, A-Aj, -A+Aj, A-Aj, -A+Aj, -A+Aj, A-Aj, -A+Aj, -A-Aj, A+Aj, - A+Aj, -A+Aj, -A+Aj, -A+Aj, A+Aj, -A+Aj, -A+Aj, A-Aj, A-Aj, A+Aj, A+Aj, A+Aj, A+Aj, -A-Aj, A+Aj, A+Aj, - A+Aj, A+Aj, A-Aj, -A-Aj, -A-Aj, -A-Aj, A-Aj, A-Aj, -A-Aj, A+Aj, -A-Aj, -A+Aj, -A-Aj, -A-Aj, -A-Aj, A+Aj, A+Aj, -A-Aj, A-Aj, A-Aj, -A+Aj, A-Aj, -A-Aj, -A-Aj, A-Aj, -A-Aj, A-Aj, A+Aj, A+Aj, -A+Aj, -A+Aj, -A-Aj, -A-Aj, A+Aj, -A-Aj, A+Aj, A-Aj, -A-Aj, A+Aj, A+Aj, A-Aj, -A-Aj, A-Aj, A-Aj, A-Aj, -A+Aj, -A-Aj, A-Aj, -A-Aj, - A+Aj, -A-Aj, A+Aj, A+Aj, A+Aj, -A+Aj, A-Aj, A+Aj, -A-Aj, -A+Aj, A-Aj, A-Aj, -A-Aj, -A-Aj, A+Aj, -A+Aj, A-Aj, A-Aj, -A+Aj, -A+Aj, A+Aj |

(14) When $N_{PS}$ = 49, if a remainder of $N_{TS}$ divided by 4 is 0, the pilot sequence is one item in the following Table 21-1. If a remainder of $N_{TS}$ divided by 4 is 2, the pilot sequence is one item in the following Table 21-1 or Table 21-2.

**Table 21-1**

| Index | Polarization | Pilot sequence |
|---|---|---|
| 1 | Polarization 1 | A-Aj, A+Aj, -A+Aj, -A+Aj, -A+Aj, A-Aj, -A+Aj, -A-Aj, -A-Aj, A+Aj, -A+Aj, -A+Aj, -A-Aj, -A-Aj, A-Aj, -A-Aj, A+Aj, A-Aj, A-Aj, -A+Aj, -A-Aj, -A+Aj, A-Aj, A+Aj, A+Aj, A-Aj, A+Aj, A-Aj, A-Aj, A+Aj, A+Aj, -A-Aj, A+Aj, A-Aj, -A+Aj, A+Aj, A+Aj, A-Aj, -A+Aj, A-Aj, A-Aj, -A-Aj, A+Aj, -A-Aj, -A+Aj, -A-Aj, -A+Aj, -A-Aj, -A-Aj |
| | Polarization 2 | A+Aj, A+Aj, -A+Aj, -A-Aj, -A-Aj, A+Aj, A-Aj, -A-Aj, A-Aj, -A+Aj, -A-Aj, A+Aj, -A+Aj, A-Aj, A-Aj, A+Aj, -A+Aj, A+Aj, A-Aj, A+Aj, -A-Aj, -A+Aj, A-Aj, A-Aj, -A+Aj, -A+Aj, A+Aj, -A+Aj, A+Aj, -A-Aj, A+Aj, -A-Aj, A-Aj, A-Aj, A-Aj, A+Aj, A+Aj, A+Aj, A-Aj, -A-Aj, -A-Aj, -A+Aj, -A-Aj, -A-Aj, -A+Aj, A-Aj, -A-Aj, -A+Aj, -A+Aj |
| 2 | Polarization 1 | -A-Aj, -A-Aj, A+Aj, -A-Aj, -A+Aj, A-Aj, -A+Aj, A-Aj, A+Aj, A+Aj, A-Aj, -A-Aj, -A-Aj, -A-Aj, - A+Aj, A-Aj, A-Aj, -A-Aj, A-Aj, A-Aj, A-Aj, -A-Aj, -A+Aj, -A-Aj, A+Aj, -A+Aj, -A+Aj, -A-Aj, A-Aj, -A+Aj, A+Aj, A+Aj, -A+Aj, -A+Aj, A+Aj, -A-Aj, -A-Aj, A-Aj, A+Aj, -A+Aj, -A-Aj, A+Aj, A-Aj, A+Aj, -A+Aj, A+Aj, -A+Aj, A+Aj, A-Aj |
| | Polarization 2 | -A+Aj, -A+Aj, A-Aj, -A+Aj, -A-Aj, A+Aj, -A-Aj, A+Aj, A-Aj, A-Aj, A+Aj, -A+Aj, -A+Aj, -A+Aj, - A-Aj, A+Aj, A+Aj, -A+Aj, A+Aj, A+Aj, A+Aj, -A+Aj, -A-Aj, -A+Aj, A-Aj, -A-Aj, -A-Aj, -A+Aj, A+Aj, -A-Aj, A-Aj, A-Aj, -A-Aj, -A-Aj, A-Aj, -A+Aj, -A+Aj, A+Aj, A-Aj, -A-Aj, -A+Aj, A-Aj, A+Aj, A-Aj, -A-Aj, A-Aj, -A-Aj, A-Aj, A+Aj |

(continued)

| Index | Polarization | Pilot sequence |
|---|---|---|
| 3 | Polarization 1 | -A-Aj, -A-Aj, A+Aj, -A-Aj, -A+Aj, A-Aj, -A+Aj, A-Aj, A+Aj, A+Aj, A-Aj, -A-Aj, -A-Aj, -A-Aj, -A+Aj, A-Aj, A-Aj, -A-Aj, A-Aj, A-Aj, A-Aj, -A-Aj, -A+Aj, -A-Aj, A+Aj, -A+Aj, -A+Aj, -A-Aj, A-Aj, -A+Aj, A+Aj, A+Aj, -A+Aj, -A+Aj, A+Aj, -A-Aj, -A-Aj, A-Aj, A+Aj, -A+Aj, -A-Aj, A+Aj, A-Aj, A+Aj, -A+Aj, A+Aj, -A+Aj, A+Aj, A-Aj |
| | Polarization 2 | A-Aj, A-Aj, -A+Aj, A-Aj, A+Aj, -A-Aj, A+Aj, -A-Aj, -A+Aj, -A+Aj, -A-Aj, A-Aj, A-Aj, A-Aj, A+Aj, -A-Aj, -A-Aj, A-Aj, -A-Aj, -A-Aj, -A-Aj, A-Aj, A+Aj, A-Aj, -A+Aj, A+Aj, A+Aj, A-Aj, -A-Aj, A+Aj, -A+Aj, -A+Aj, A+Aj, A+Aj, -A+Aj, A-Aj, A-Aj, -A-Aj, -A+Aj, A+Aj, A-Aj, -A+Aj, -A-Aj, -A+Aj, A+Aj, -A+Aj, A+Aj, -A+Aj, -A-Aj |
| 4 | Polarization 1 | -A+Aj, -A+Aj, A-Aj, -A+Aj, -A-Aj, A+Aj, -A-Aj, A+Aj, A-Aj, A-Aj, A+Aj, -A+Aj, -A+Aj, -A+Aj, -A-Aj, A+Aj, A+Aj, -A+Aj, A+Aj, A+Aj, A+Aj, -A+Aj, -A-Aj, -A+Aj, A-Aj, -A-Aj, -A-Aj, -A+Aj, A+Aj, -A-Aj, A-Aj, A-Aj, -A-Aj, -A-Aj, A-Aj, -A+Aj, -A+Aj, A+Aj, A-Aj, -A-Aj, -A+Aj, A-Aj, A+Aj, A-Aj, -A-Aj, A-Aj, -A-Aj, A-Aj, A+Aj |
| | Polarization 2 | A+Aj, A+Aj, -A-Aj, A+Aj, A-Aj, -A+Aj, A-Aj, -A+Aj, -A-Aj, -A-Aj, -A+Aj, A+Aj, A+Aj, A+Aj, A-Aj, -A+Aj, -A+Aj, A+Aj, -A+Aj, -A+Aj, -A+Aj, A+Aj, A-Aj, A+Aj, -A-Aj, A-Aj, A-Aj, A+Aj, -A+Aj, A-Aj, -A-Aj, -A-Aj, A-Aj, A-Aj, -A-Aj, A+Aj, A+Aj, -A+Aj, -A-Aj, A-Aj, A+Aj, -A-Aj, -A+Aj, -A-Aj, A-Aj, -A-Aj, A-Aj, -A-Aj, -A+Aj |
| 5 | Polarization 1 | A-Aj, A-Aj, -A+Aj, A-Aj, A+Aj, -A-Aj, A+Aj, -A-Aj, -A+Aj, -A+Aj, -A-Aj, A-Aj, A-Aj, A-Aj, A+Aj, -A-Aj, -A-Aj, A-Aj, -A-Aj, -A-Aj, -A-Aj, A-Aj, A+Aj, A-Aj, -A+Aj, A+Aj, A+Aj, A-Aj, -A-Aj, A+Aj, -A+Aj, -A+Aj, A+Aj, A+Aj, -A+Aj, A-Aj, A-Aj, -A-Aj, -A+Aj, A+Aj, A-Aj, -A+Aj, -A-Aj, -A+Aj, A+Aj, -A+Aj, A+Aj, -A+Aj, -A-Aj |
| | Polarization 2 | A+Aj, A+Aj, -A-Aj, A+Aj, A-Aj, -A+Aj, A-Aj, -A+Aj, -A-Aj, -A-Aj, -A+Aj, A+Aj, A+Aj, A+Aj, A-Aj, -A+Aj, -A+Aj, A+Aj, -A+Aj, -A+Aj, -A+Aj, A+Aj, A-Aj, A+Aj, -A-Aj, A-Aj, A-Aj, A+Aj, -A+Aj, A-Aj, -A-Aj, -A-Aj, A-Aj, A-Aj, -A-Aj, A+Aj, A+Aj, -A+Aj, -A-Aj, A-Aj, A+Aj, -A-Aj, -A+Aj, A+Aj, -A-Aj, A-Aj, -A-Aj, A-Aj, -A-Aj, -A+Aj |
| 6 | Polarization 1 | -A+Aj, A+Aj, A+Aj, -A+Aj, -A+Aj, A+Aj, A+Aj, A+Aj, A+Aj, -A-Aj, -A-Aj, A-Aj, -A-Aj, -A+Aj, -A-Aj, A-Aj, A-Aj, A-Aj, -A+Aj, -A-Aj, A-Aj, -A+Aj, A-Aj, A+Aj, A-Aj, A+Aj, -A-Aj, -A-Aj, A+Aj, A-Aj, -A-Aj, -A+Aj, A-Aj, -A-Aj, -A+Aj, -A+Aj, -A-Aj, A+Aj, A+Aj, -A+Aj, A-Aj, -A+Aj, -A+Aj, A-Aj, A-Aj, -A-Aj, -A-Aj, -A+Aj, A+Aj |
| | Polarization 2 | A-Aj, A+Aj, A-Aj, A+Aj, A-Aj, -A-Aj, -A-Aj, A-Aj, -A+Aj, A+Aj, -A+Aj, A+Aj, A-Aj, -A-Aj, A-Aj, -A-Aj, A-Aj, -A-Aj, -A-Aj, -A-Aj, A+Aj, -A-Aj, A-Aj, A-Aj, -A+Aj, -A+Aj, A-Aj, -A-Aj, -A-Aj, A+Aj, -A+Aj, A-Aj, A+Aj, A+Aj, -A+Aj, -A+Aj, -A+Aj, A+Aj, -A-Aj, A+Aj, -A+Aj, A-Aj, -A+Aj, A+Aj, A-Aj, -A+Aj, -A-Aj, -A+Aj, A+Aj |
| 7 | Polarization 1 | -A-Aj, A-Aj, -A+Aj, -A+Aj, A+Aj, -A-Aj, -A+Aj, A+Aj, -A-Aj, A-Aj, A+Aj, A+Aj, -A+Aj, -A-Aj, -A+Aj, A-Aj, A-Aj, A+Aj, -A-Aj, -A-Aj, A-Aj, -A+Aj, A-Aj, A+Aj, A+Aj, A-Aj, -A-Aj, A-Aj, -A+Aj, -A+Aj, -A+Aj, A+Aj, A-Aj, -A-Aj, A+Aj, -A-Aj, A-Aj, A-Aj, -A-Aj, -A+Aj, -A-Aj, -A+Aj, A-Aj, -A-Aj, -A-Aj, A+Aj, A+Aj, -A+Aj, A+Aj |
| | Polarization 2 | A-Aj, -A-Aj, -A-Aj, A-Aj, -A-Aj, -A+Aj, A+Aj, A+Aj, A-Aj, -A-Aj, -A-Aj, A-Aj, A-Aj, A-Aj, -A-Aj, -A-Aj, -A+Aj, A-Aj, -A+Aj, A+Aj, A+Aj, A+Aj, -A+Aj, A+Aj, -A+Aj, -A+Aj, -A+Aj, -A-Aj, A-Aj, A+Aj, -A-Aj, A+Aj, -A-Aj, -A+Aj, A-Aj, A+Aj, A-Aj, A+Aj, A+Aj, -A+Aj, A-Aj, A-Aj, -A+Aj, -A+Aj, -A-Aj, A-Aj, -A+Aj, A+Aj, -A-Aj |

**Table 21-2**

| Index | Polarization | Pilot sequence |
|---|---|---|
| 1 | Polarization 1 | -A-Aj, A+Aj, A+Aj, A+Aj, -A-Aj, A+Aj, A-Aj, -A+Aj, A-Aj, A+Aj, A-Aj, -A-Aj, A-Aj, -A-Aj, -A+Aj, A+Aj, -A-Aj, -A-Aj, A+Aj, -A+Aj, A-Aj, A+Aj, -A-Aj, -A+Aj, -A+Aj, A+Aj, A-Aj, A+Aj, -A+Aj, -A+Aj, A-Aj, -A-Aj, -A+Aj, -A+Aj, -A+Aj, A+Aj, -A-Aj, A-Aj, A-Aj, A-Aj, -A+Aj, -A-Aj, -A-Aj, -A-Aj, -A-Aj, A-Aj, A+Aj, -A-Aj, A+Aj |
| | Polarization 2 | A-Aj, -A+Aj, -A+Aj, -A+Aj, A-Aj, -A+Aj, -A-Aj, A+Aj, -A-Aj, -A+Aj, -A-Aj, A-Aj, -A-Aj, A-Aj, A+Aj, - A+Aj, A-Aj, A-Aj, -A+Aj, A+Aj, -A-Aj, -A+Aj, A-Aj, A+Aj, A+Aj, -A+Aj, -A-Aj, -A+Aj, A+Aj, A+Aj, -A-Aj, A-Aj, A+Aj, A+Aj, A+Aj, -A+Aj, A-Aj, -A-Aj, -A-Aj, -A-Aj, A+Aj, A-Aj, A-Aj, A-Aj, A-Aj, -A-Aj, - A+Aj, A-Aj, -A+Aj |
| 2 | Polarization 1 | A+Aj, -A-Aj, -A-Aj, -A-Aj, A+Aj, -A-Aj, -A+Aj, A-Aj, -A+Aj, -A-Aj, -A+Aj, A+Aj, -A+Aj, A+Aj, A-Aj, - A-Aj, A+Aj, A+Aj, -A-Aj, A-Aj, -A+Aj, -A-Aj, A+Aj, A-Aj, A-Aj, -A-Aj, -A+Aj, -A-Aj, A-Aj, A-Aj, - A+Aj, A+Aj, A-Aj, A-Aj, A-Aj, -A-Aj, A+Aj, -A+Aj, -A+Aj, -A+Aj, A-Aj, A+Aj, A+Aj, A+Aj, A+Aj, - A+Aj, -A-Aj, A+Aj, -A-Aj |
| | Polarization 2 | -A+Aj, A-Aj, A-Aj, A-Aj, -A+Aj, A-Aj, A+Aj, -A-Aj, A+Aj, A-Aj, A+Aj, -A+Aj, A+Aj, -A+Aj, -A-Aj, A-Aj, -A+Aj, -A+Aj, A-Aj, -A-Aj, A+Aj, A-Aj, -A+Aj, -A-Aj, -A-Aj, A-Aj, A+Aj, A-Aj, -A-Aj, -A-Aj, A+Aj, -A+Aj, -A-Aj, -A-Aj, -A-Aj, A-Aj, -A+Aj, A+Aj, A+Aj, A+Aj, -A-Aj, -A+Aj, -A+Aj, -A+Aj, -A+Aj, A+Aj, A-Aj, -A+Aj, A-Aj |
| 3 | Polarization 1 | -A-Aj, A+Aj, -A-Aj, A+Aj, -A+Aj, -A-Aj, -A-Aj, -A-Aj, -A-Aj, A-Aj, -A+Aj, -A+Aj, -A+Aj, -A-Aj, A+Aj, A-Aj, A-Aj, A-Aj, -A-Aj, -A+Aj, A-Aj, A-Aj, A+Aj, -A+Aj, A+Aj, A-Aj, A-Aj, -A-Aj, A+Aj, -A+Aj, A-Aj, A+Aj, -A-Aj, -A-Aj, A+Aj, A-Aj, -A-Aj, -A+Aj, -A-Aj, -A+Aj, A+Aj, -A+Aj, A-Aj, -A+Aj, A+Aj, -A-Aj, A+Aj, A+Aj, A+Aj |
| | Polarization 2 | A-Aj, -A+Aj, A-Aj, -A+Aj, A+Aj, A-Aj, A-Aj, A-Aj, A-Aj, -A-Aj, A+Aj, A+Aj, A+Aj, A-Aj, -A+Aj, -A-Aj, -A-Aj, -A-Aj, A-Aj, A+Aj, -A-Aj, -A-Aj, -A+Aj, A+Aj, -A+Aj, -A-Aj, -A-Aj, A-Aj, -A+Aj, A+Aj, A-Aj, - A+Aj, A-Aj, A-Aj, -A+Aj, -A-Aj, A-Aj, A+Aj, A-Aj, A+Aj, -A+Aj, A+Aj, -A-Aj, A+Aj, -A+Aj, A-Aj, - A+Aj, -A+Aj, -A+Aj |
| 4 | Polarization 1 | A+Aj, -A-Aj, A+Aj, -A-Aj, A-Aj, A+Aj, A+Aj, A+Aj, A+Aj, -A+Aj, A-Aj, A-Aj, A-Aj, A+Aj, -A-Aj, - A+Aj, -A+Aj, -A+Aj, A+Aj, A-Aj, -A+Aj, -A+Aj, -A-Aj, A-Aj, -A-Aj, -A+Aj, -A+Aj, A+Aj, -A-Aj, A-Aj, - A+Aj, -A-Aj, A+Aj, A+Aj, -A-Aj, -A+Aj, A+Aj, A-Aj, A+Aj, A-Aj, -A-Aj, A-Aj, -A+Aj, A-Aj, -A-Aj, A+Aj, -A-Aj, -A-Aj, -A-Aj |
| | Polarization 2 | -A+Aj, A-Aj, -A+Aj, A-Aj, -A-Aj, -A+Aj, -A+Aj, -A+Aj, -A+Aj, A+Aj, -A-Aj, -A-Aj, -A-Aj, -A+Aj, A-Aj, A+Aj, A+Aj, A+Aj, -A+Aj, -A-Aj, A+Aj, A+Aj, A-Aj, -A-Aj, A-Aj, A+Aj, A+Aj, -A+Aj, A-Aj, -A-Aj, A+Aj, A-Aj, -A+Aj, -A+Aj, A-Aj, A+Aj, -A+Aj, -A-Aj, -A+Aj, -A-Aj, A-Aj, -A-Aj, A+Aj, -A-Aj, A-Aj, - A+Aj, A-Aj, A-Aj, A-Aj |
| 5 | Polarization 1 | -A-Aj, -A-Aj, -A+Aj, -A-Aj, A+Aj, -A-Aj, A+Aj, A-Aj, -A+Aj, A+Aj, A-Aj, A+Aj, A-Aj, A+Aj, -A+Aj, A+Aj, -A-Aj, A-Aj, A+Aj, -A+Aj, -A-Aj, -A-Aj, A+Aj, A-Aj, A-Aj, A+Aj, A+Aj, A-Aj, -A+Aj, -A-Aj, A-Aj, A-Aj, A+Aj, -A-Aj, A-Aj, -A-Aj, -A+Aj, -A+Aj, -A+Aj, -A-Aj, -A+Aj, -A+Aj, A-Aj, -A-Aj, -A-Aj, -A-Aj, -A+Aj, A+Aj, A+Aj |
| | Polarization 2 | -A+Aj, -A+Aj, -A-Aj, -A+Aj, A-Aj, -A+Aj, A-Aj, A+Aj, -A-Aj, A-Aj, A+Aj, A-Aj, A+Aj, A-Aj, -A-Aj, A-Aj, -A+Aj, A+Aj, A-Aj, -A-Aj, -A+Aj, -A+Aj, A-Aj, A+Aj, A+Aj, A-Aj, A-Aj, A+Aj, -A-Aj, -A+Aj, A+Aj, A+Aj, A-Aj, -A+Aj, A+Aj, -A-Aj, -A-Aj, -A-Aj, -A+Aj, -A-Aj, -A-Aj, A+Aj, -A+Aj, -A+Aj, -A+Aj, -A-Aj, A-Aj, A-Aj |
| 6 | Polarization 1 | -A-Aj, -A-Aj, -A+Aj, -A-Aj, A+Aj, -A-Aj, A+Aj, A-Aj, -A+Aj, A+Aj, A-Aj, A+Aj, A-Aj, A+Aj, -A+Aj, A+Aj, -A-Aj, A-Aj, A+Aj, -A+Aj, -A-Aj, -A-Aj, A+Aj, A-Aj, A-Aj, A+Aj, A+Aj, A-Aj, -A+Aj, -A-Aj, A-Aj, A-Aj, A+Aj, -A-Aj, A-Aj, -A-Aj, -A+Aj, -A+Aj, -A+Aj, -A-Aj, -A+Aj, -A+Aj, A-Aj, -A-Aj, -A-Aj, -A-Aj, -A+Aj, A+Aj, A+Aj |
| | Polarization 2 | A-Aj, A-Aj, A+Aj, A-Aj, -A+Aj, A-Aj, -A+Aj, -A-Aj, A+Aj, -A+Aj, -A-Aj, -A+Aj, -A-Aj, -A+Aj, A+Aj, - A+Aj, A-Aj, -A-Aj, -A+Aj, A+Aj, A-Aj, A-Aj, -A+Aj, -A-Aj, -A-Aj, -A+Aj, -A+Aj, -A-Aj, A+Aj, A-Aj, -A-Aj, -A-Aj, -A+Aj, A-Aj, -A-Aj, A-Aj, A+Aj, A+Aj, A+Aj, A-Aj, A+Aj, A+Aj, -A-Aj, A-Aj, A-Aj, A-Aj, A+Aj, -A+Aj, -A+Aj |

(continued)

| Index | Polarization | Pilot sequence |
|---|---|---|
| 7 | Polarization 1 | -A+Aj, -A+Aj, -A+Aj, -A-Aj, A-Aj, A-Aj, -A-Aj, A+Aj, -A-Aj, A+Aj, -A+Aj, A-Aj, -A+Aj, -A+Aj, A+Aj, - A+Aj, A+Aj, -A-Aj, -A+Aj, -A-Aj, A+Aj, A+Aj, -A-Aj, -A-Aj, A-Aj, A+Aj, -A+Aj, A+Aj, A+Aj, -A+Aj, - A+Aj, A-Aj, -A-Aj, A+Aj, A+Aj, A+Aj, -A-Aj, A+Aj, A-Aj, A-Aj, -A-Aj, -A-Aj, -A-Aj, A-Aj, -A-Aj, - A+Aj, A-Aj, A-Aj, A-Aj |
| | Polarization 2 | -A-Aj, -A-Aj, -A-Aj, -A+Aj, A+Aj, A+Aj, -A+Aj, A-Aj, -A+Aj, A-Aj, -A-Aj, A+Aj, -A-Aj, -A-Aj, A-Aj, - A-Aj, A-Aj, -A+Aj, -A-Aj, -A+Aj, A-Aj, A-Aj, -A+Aj, -A+Aj, A+Aj, A-Aj, -A-Aj, A-Aj, A-Aj, -A-Aj, -A-Aj, A+Aj, -A+Aj, A-Aj, A-Aj, A-Aj, -A+Aj, A-Aj, A+Aj, A+Aj, -A+Aj, -A+Aj, -A+Aj, A+Aj, -A+Aj, -A-Aj, A+Aj, A+Aj, A+Aj |
| 8 | Polarization 1 | -A+Aj, -A+Aj, -A+Aj, -A-Aj, A-Aj, A-Aj, -A-Aj, A+Aj, -A-Aj, A+Aj, -A+Aj, A-Aj, -A+Aj, -A+Aj, A+Aj, - A+Aj, A+Aj, -A-Aj, -A+Aj, -A-Aj, A+Aj, A+Aj, -A-Aj, -A-Aj, A-Aj, A+Aj, -A+Aj, A+Aj, A+Aj, -A+Aj, - A+Aj, A-Aj, -A-Aj, A+Aj, A+Aj, A+Aj, -A-Aj, A+Aj, A-Aj, A-Aj, -A-Aj, -A-Aj, -A-Aj, A-Aj, -A-Aj, - A+Aj, A-Aj, A-Aj, A-Aj |
| | Polarization 2 | A+Aj, A+Aj, A+Aj, A-Aj, -A-Aj, -A-Aj, A-Aj, -A+Aj, A-Aj, -A+Aj, A+Aj, -A-Aj, A+Aj, A+Aj, -A+Aj, A+Aj, -A+Aj, A-Aj, A+Aj, A-Aj, -A+Aj, -A+Aj, A-Aj, A-Aj, -A-Aj, -A+Aj, A+Aj, -A+Aj, -A+Aj, A+Aj, A+Aj, -A-Aj, A-Aj, -A+Aj, -A+Aj, -A+Aj, A-Aj, -A+Aj, -A-Aj, -A-Aj, A-Aj, A-Aj, A-Aj, -A-Aj, A-Aj, A+Aj, -A-Aj, -A-Aj, -A-Aj |
| 9 | Polarization 1 | A-Aj, A-Aj, A-Aj, A+Aj, -A+Aj, -A+Aj, A+Aj, -A-Aj, A+Aj, -A-Aj, A-Aj, -A+Aj, A-Aj, A-Aj, -A-Aj, A-Aj, -A-Aj, A+Aj, A-Aj, A+Aj, -A-Aj, -A-Aj, A+Aj, A+Aj, -A+Aj, -A-Aj, A-Aj, -A-Aj, -A-Aj, A-Aj, A-Aj, - A+Aj, A+Aj, -A-Aj, -A-Aj, -A-Aj, A+Aj, -A-Aj, -A+Aj, -A+Aj, A+Aj, A+Aj, A+Aj, -A+Aj, A+Aj, A-Aj, - A+Aj, -A+Aj, -A+Aj |
| | Polarization 2 | -A-Aj, -A-Aj, -A-Aj, -A+Aj, A+Aj, A+Aj, -A+Aj, A-Aj, -A+Aj, A-Aj, -A-Aj, A+Aj, -A-Aj, -A-Aj, A-Aj, - A-Aj, A-Aj, -A+Aj, -A-Aj, -A+Aj, A-Aj, A-Aj, -A+Aj, -A+Aj, A+Aj, A-Aj, -A-Aj, A-Aj, A-Aj, -A-Aj, -A-Aj, A+Aj, -A+Aj, A-Aj, A-Aj, A-Aj, -A+Aj, A-Aj, A+Aj, A+Aj, -A+Aj, -A+Aj, -A+Aj, A+Aj, -A+Aj, -A-Aj, A+Aj, A+Aj, A+Aj |
| 10 | Polarization 1 | A-Aj, A-Aj, A-Aj, A+Aj, -A+Aj, -A+Aj, A+Aj, -A-Aj, A+Aj, -A-Aj, A-Aj, -A+Aj, A-Aj, A-Aj, -A-Aj, A-Aj, -A-Aj, A+Aj, A-Aj, A+Aj, -A-Aj, -A-Aj, A+Aj, A+Aj, -A+Aj, -A-Aj, A-Aj, -A-Aj, -A-Aj, A-Aj, A-Aj, - A+Aj, A+Aj, -A-Aj, -A-Aj, -A-Aj, A+Aj, -A-Aj, -A+Aj, -A+Aj, A+Aj, A+Aj, A+Aj, -A+Aj, A+Aj, A-Aj, - A+Aj, -A+Aj, -A+Aj |
| | Polarization 2 | A+Aj, A+Aj, A+Aj, A-Aj, -A-Aj, -A-Aj, A-Aj, -A+Aj, A-Aj, -A+Aj, A+Aj, -A-Aj, A+Aj, A+Aj, -A+Aj, A+Aj, -A+Aj, A-Aj, A+Aj, A-Aj, -A+Aj, -A+Aj, A-Aj, A-Aj, -A-Aj, -A+Aj, A+Aj, -A+Aj, -A+Aj, A+Aj, A+Aj, -A-Aj, A-Aj, -A+Aj, -A+Aj, -A+Aj, A-Aj, -A+Aj, -A-Aj, -A-Aj, A-Aj, A-Aj, A-Aj, -A-Aj, A-Aj, A+Aj, -A-Aj, -A-Aj, -A-Aj |
| 11 | Polarization 1 | A+Aj, A+Aj, A-Aj, A+Aj, -A-Aj, A+Aj, -A-Aj, -A+Aj, A-Aj, -A-Aj, -A+Aj, -A-Aj, -A+Aj, -A-Aj, A-Aj, -A-Aj, A+Aj, -A+Aj, -A-Aj, A-Aj, A+Aj, A+Aj, -A-Aj, -A+Aj, -A+Aj, -A-Aj, -A-Aj, -A+Aj, A-Aj, A+Aj, - A+Aj, -A+Aj, -A-Aj, A+Aj, -A+Aj, A+Aj, A-Aj, A-Aj, A-Aj, A+Aj, A-Aj, A-Aj, -A+Aj, A+Aj, A+Aj, A+Aj, A-Aj, -A-Aj, -A-Aj |
| | Polarization 2 | -A+Aj, -A+Aj, -A-Aj, -A+Aj, A-Aj, -A+Aj, A-Aj, A+Aj, -A-Aj, A-Aj, A+Aj, A-Aj, A+Aj, A-Aj, -A-Aj, A-Aj, -A+Aj, A+Aj, A-Aj, -A-Aj, -A+Aj, -A+Aj, A-Aj, A+Aj, A+Aj, A-Aj, A-Aj, A+Aj, -A-Aj, -A+Aj, A+Aj, A+Aj, A-Aj, -A+Aj, A+Aj, -A-Aj, -A-Aj, -A-Aj, -A+Aj, -A-Aj, -A-Aj, A+Aj, -A+Aj, -A+Aj, -A+Aj, -A-Aj, A-Aj, A-Aj |
| 12 | Polarization 1 | A+Aj, A+Aj, A-Aj, A+Aj, -A-Aj, A+Aj, -A-Aj, -A+Aj, A-Aj, -A-Aj, -A+Aj, -A-Aj, -A+Aj, -A-Aj, A-Aj, -A-Aj, A+Aj, -A+Aj, -A-Aj, A-Aj, A+Aj, A+Aj, -A-Aj, -A+Aj, -A+Aj, -A-Aj, -A-Aj, -A+Aj, A-Aj, A+Aj, - A+Aj, -A+Aj, -A-Aj, A+Aj, -A+Aj, A+Aj, A-Aj, A-Aj, A-Aj, A+Aj, A-Aj, A-Aj, -A+Aj, A+Aj, A+Aj, A+Aj, A-Aj, -A-Aj, -A-Aj |
| | Polarization 2 | A-Aj, A-Aj, A+Aj, A-Aj, -A+Aj, A-Aj, -A+Aj, -A-Aj, A+Aj, -A+Aj, -A-Aj, -A+Aj, -A-Aj, -A+Aj, A+Aj, - A+Aj, A-Aj, -A-Aj, -A+Aj, A+Aj, A-Aj, A-Aj, -A+Aj, -A-Aj, -A-Aj, -A+Aj, -A+Aj, -A-Aj, A+Aj, A-Aj, -A-Aj, -A-Aj, -A+Aj, A-Aj, -A-Aj, A-Aj, A+Aj, A+Aj, A+Aj, A-Aj, A+Aj, A+Aj, -A-Aj, A-Aj, A-Aj, A-Aj, A+Aj, -A+Aj, -A+Aj |

(continued)

| Index | Polarization | Pilot sequence |
|---|---|---|
| 13 | Polarization 1 | A-Aj, A-Aj, A+Aj, A-Aj, A+Aj, -A+Aj, A-Aj, A-Aj, -A-Aj, -A-Aj, -A+Aj, A+Aj, A-Aj, -A+Aj, -A-Aj, A+Aj, -A+Aj, -A-Aj, -A+Aj, A-Aj, A+Aj, A-Aj, -A+Aj, -A-Aj, A-Aj, -A+Aj, -A-Aj, -A-Aj, -A-Aj, -A-Aj, A+Aj, -A-Aj, -A-Aj, A-Aj, A+Aj, -A+Aj, A+Aj, A+Aj, -A-Aj, -A+Aj, A-Aj, A-Aj, -A-Aj, -A+Aj, -A+Aj, A+Aj, A+Aj, A+Aj, A+Aj |
| | Polarization 2 | A-Aj, A-Aj, -A+Aj, A-Aj, A-Aj, A-Aj, A+Aj, -A+Aj, -A-Aj, -A+Aj, -A-Aj, A+Aj, A-Aj, A-Aj, -A+Aj, -A-Aj, A+Aj, A-Aj, -A-Aj, -A+Aj, -A-Aj, -A-Aj, A+Aj, A-Aj, A+Aj, A-Aj, -A-Aj, A-Aj, A-Aj, -A-Aj, -A+Aj, A-Aj, A+Aj, A+Aj, -A+Aj, -A-Aj, A+Aj, A+Aj, A+Aj, -A+Aj, -A+Aj, -A-Aj, A+Aj, A-Aj, -A+Aj, -A+Aj, - A-Aj, -A+Aj, -A+Aj |

(15) When $N_{PS}$ = 51, the pilot sequence is one item in the following Table 22.

**Table 22**

| Index | Polarization | Pilot sequence |
|---|---|---|
| 1 | Polarization 1 | -A+Aj, -A+Aj, -A+Aj, A+Aj, A-Aj, A-Aj. -A+Aj, -A+Aj, -A-Aj, A-Aj, -A+Aj, -A-Aj, -A+Aj, -A+Aj, A+Aj, - A-Aj, -A+Aj, A-Aj, -A+Aj, -A-Aj, A+Aj, A-Aj, -A-Aj, -A-Aj, -A+Aj, A+Aj, A-Aj, -A-Aj, A-Aj, A-Aj, -A-Aj, A-Aj, -A-Aj, A+Aj, -A+Aj, -A-Aj, A+Aj, -A-Aj, A+Aj, A+Aj, -A+Aj, A+Aj, A+Aj, A+Aj, A-Aj, A+Aj, -A-Aj, A-Aj, A-Aj, A-Aj, -A+Aj |
| | Polarization 2 | -A-Aj, -A-Aj, -A-Aj, A-Aj, A+Aj, A+Aj, -A-Aj, -A-Aj, -A+Aj, A+Aj, -A-Aj, -A+Aj, -A-Aj, -A-Aj, A-Aj, - A+Aj, -A-Aj, A+Aj, -A-Aj, -A+Aj, A-Aj, A+Aj, -A+Aj, -A+Aj, -A-Aj, A-Aj, A+Aj, -A+Aj, A+Aj, A+Aj, - A+Aj, A+Aj, -A+Aj, A-Aj, -A-Aj, -A+Aj, A-Aj, -A+Aj, A-Aj, A-Aj, -A-Aj, A-Aj, A-Aj, A+Aj, A-Aj, - A+Aj, A+Aj, A+Aj, A+Aj, -A-Aj |
| 2 | Polarization 1 | -A+Aj, -A+Aj, -A+Aj, A+Aj, A-Aj, A-Aj. -A+Aj, -A+Aj, -A-Aj, A-Aj, -A+Aj, -A-Aj, -A+Aj, -A+Aj, A+Aj, - A-Aj, -A+Aj, A-Aj, -A+Aj, -A-Aj, A+Aj, A-Aj, -A-Aj, -A-Aj, -A+Aj, A+Aj, A-Aj, -A-Aj, A-Aj, A-Aj, -A-Aj, A-Aj, -A-Aj, A+Aj, -A+Aj, -A-Aj, A+Aj, -A-Aj, A+Aj, A+Aj, -A+Aj, A+Aj, A+Aj, A+Aj, A-Aj, A+Aj, -A-Aj, A-Aj, A-Aj, A-Aj, -A+Aj |
| | Polarization 2 | A+Aj, A+Aj, A+Aj, -A+Aj, -A-Aj, -A-Aj, A+Aj, A+Aj, A-Aj, -A-Aj, A+Aj, A-Aj, A+Aj, A+Aj, -A+Aj, A-Aj, A+Aj, -A-Aj, A+Aj, A-Aj, -A+Aj, -A-Aj, A-Aj, A-Aj, A+Aj, -A+Aj, -A-Aj, A-Aj, -A-Aj, -A-Aj, A-Aj, -A-Aj, A-Aj, -A+Aj, A+Aj, A-Aj, -A+Aj, A-Aj, -A+Aj, -A+Aj, A+Aj, -A+Aj, -A+Aj, -A+Aj, -A-Aj, -A+Aj, A-Aj, - A-Aj, -A-Aj, -A-Aj, A+Aj |
| 3 | Polarization 1 | A-Aj, A-Aj, A-Aj, -A-Aj, -A+Aj, -A+Aj, A-Aj, A-Aj, A+Aj, -A+Aj, A-Aj, A+Aj, A-Aj, A-Aj, -A-Aj, A+Aj, A-Aj, -A+Aj, A-Aj, A+Aj, -A-Aj, -A+Aj, A+Aj, A+Aj, A-Aj, -A-Aj, -A+Aj, A+Aj, -A+Aj, -A+Aj, A+Aj, -A+Aj, A+Aj, A-Aj, A-Aj, A+Aj, -A-Aj, A+Aj, -A-Aj, -A-Aj, A-Aj, -A-Aj, -A-Aj, -A-Aj, -A+Aj, -A-Aj, A+Aj, - A+Aj, -A+Aj, -A+Aj, A-Aj |
| | Polarization 2 | -A-Aj, -A-Aj, -A-Aj, A-Aj, A+Aj, A+Aj, -A-Aj, -A-Aj, -A+Aj, A+Aj, -A-Aj, -A+Aj, -A-Aj, -A-Aj, A-Aj, - A+Aj, -A-Aj, A+Aj, -A-Aj, -A+Aj, A-Aj, A+Aj, -A+Aj, -A+Aj, -A-Aj, A-Aj, A+Aj, -A+Aj, A+Aj, A+Aj, - A+Aj, A+Aj, -A+Aj, A-Aj, -A-Aj, -A+Aj, A-Aj, -A+Aj, A-Aj, A-Aj, -A-Aj, A-Aj, A-Aj, A+Aj, A-Aj, - A+Aj, A+Aj, A+Aj, A+Aj, -A-Aj |
| 4 | Polarization 1 | A-Aj, A-Aj, A-Aj, -A-Aj, -A+Aj, -A+Aj, A-Aj, A-Aj, A+Aj, -A+Aj, A-Aj, A+Aj, A-Aj, A-Aj, -A-Aj, A+Aj, A-Aj, -A+Aj, A-Aj, A+Aj, -A-Aj, -A+Aj, A+Aj, A+Aj, A-Aj, -A-Aj, -A+Aj, A+Aj, -A+Aj, -A+Aj, A+Aj, -A-Aj, A+Aj, -A-Aj, -A-Aj, A-Aj, -A-Aj, -A-Aj, -A-Aj, -A-Aj, -A+Aj, -A-Aj, A+Aj, - A+Aj, -A+Aj, -A+Aj, A-Aj |
| | Polarization 2 | A+Aj, A+Aj, A+Aj, -A+Aj, -A-Aj, -A-Aj, A+Aj, A+Aj, A-Aj, -A-Aj, A+Aj, A-Aj, A+Aj, A+Aj, -A+Aj, A-Aj, A+Aj, -A-Aj, A+Aj, A-Aj, -A+Aj, -A-Aj, A-Aj, A-Aj, A+Aj, -A+Aj, -A-Aj, A-Aj, -A-Aj, -A-Aj, -A-Aj, A-Aj, -A-Aj, A-Aj, -A+Aj, A+Aj, A-Aj, -A+Aj, A-Aj, -A+Aj, -A+Aj, A+Aj, -A+Aj, -A+Aj, -A+Aj, -A-Aj, -A+Aj, A-Aj, - A-Aj, -A-Aj, -A-Aj, A+Aj |

(continued)

| Index | Polarization | Pilot sequence |
|---|---|---|
| 5 | Polarization 1 | -A+Aj, A-Aj, A-Aj, A-Aj, A+Aj, -A-Aj, A-Aj, -A-Aj, -A-Aj, -A-Aj, -A+Aj, -A-Aj, -A-Aj, A+Aj, -A-Aj, A+Aj, -A+Aj, -A-Aj, A+Aj, A-Aj, A+Aj, A-Aj, A-Aj, A+Aj, A-Aj, -A-Aj, -A+Aj, A+Aj, A+Aj, A-Aj, -A-Aj, A+Aj, - A+Aj, A-Aj, -A+Aj, A+Aj, -A-Aj, -A+Aj, -A+Aj, A+Aj, -A+Aj, A-Aj, A+Aj, -A+Aj, -A+Aj, A-Aj, A-Aj, -A-Aj, -A+Aj, -A+Aj, -A+Aj |
| | Polarization 2 | A+Aj, -A-Aj, -A-Aj, -A-Aj, -A+Aj, A-Aj. -A-Aj, A-Aj, A-Aj, A-Aj, A+Aj, A-Aj, A-Aj, -A+Aj, A-Aj, -A+Aj, A+Aj, A-Aj, -A+Aj, -A-Aj, -A+Aj, -A-Aj, -A-Aj, -A+Aj, -A-Aj, A-Aj, A+Aj, -A+Aj, -A+Aj, -A-Aj, A-Aj, - A+Aj, A+Aj, -A-Aj, A+Aj, -A+Aj, A-Aj, A+Aj, A+Aj, -A+Aj, A+Aj, -A-Aj, -A+Aj, A+Aj, A+Aj, -A-Aj, -A-Aj, A-Aj, A+Aj, A+Aj, A+Aj |
| 6 | Polarization 1 | A-Aj, -A+Aj, -A+Aj, -A+Aj, -A-Aj, A+Aj, -A+Aj, A+Aj, A+Aj, A+Aj, A-Aj, A+Aj, A+Aj, -A-Aj, A+Aj, -A-Aj, A-Aj, A+Aj, -A-Aj, -A+Aj, -A-Aj, -A+Aj, -A+Aj, -A-Aj, -A+Aj, A+Aj, A-Aj, -A-Aj, -A-Aj, -A+Aj, A+Aj, -A-Aj, A-Aj, -A+Aj, A-Aj, -A-Aj, A+Aj, A-Aj, A-Aj, -A-Aj, A-Aj, -A+Aj, -A-Aj, A-Aj, A-Aj, -A+Aj, -A+Aj, A+Aj, A-Aj, A-Aj, A-Aj |
| | Polarization 2 | -A-Aj, A+Aj, A+Aj, A+Aj, A-Aj, -A+Aj, A+Aj, -A+Aj, -A+Aj, -A+Aj, -A-Aj, -A+Aj, -A+Aj, A-Aj, -A+Aj, A-Aj, -A-Aj, -A+Aj, A-Aj, A+Aj, A-Aj, A+Aj, A+Aj, A-Aj, A+Aj, -A+Aj, -A-Aj, A-Aj, A-Aj, A+Aj, -A+Aj, A-Aj, -A-Aj, A+Aj, -A-Aj, A-Aj, -A+Aj, -A-Aj, -A-Aj, A-Aj, -A-Aj, A+Aj, A-Aj, -A-Aj, -A-Aj, A+Aj, A+Aj, - A+Aj, -A-Aj, -A-Aj, -A-Aj |
| 7 | Polarization 1 | -A+Aj, -A+Aj, A+Aj, -A-Aj, A+Aj, -A+Aj, A+Aj, -A+Aj, A+Aj, A+Aj, A-Aj, A+Aj, -A+Aj, A-Aj, -A+Aj, - A+Aj, A-Aj, -A-Aj, -A+Aj, -A-Aj, -A+Aj, A+Aj, A-Aj, -A-Aj, -A-Aj, -A-Aj, A+Aj, A-Aj, -A-Aj, A-Aj, - A+Aj, A+Aj, -A+Aj, -A+Aj, A-Aj, A-Aj, -A-Aj, -A-Aj, A-Aj, A-Aj, A-Aj, A+Aj, A+Aj, -A+Aj, -A-Aj, A-Aj, - A-Aj, -A+Aj, A-Aj, -A-Aj, A+Aj |
| | Polarization 2 | -A-Aj, A-Aj, -A+Aj, A-Aj, -A-Aj, A-Aj, -A-Aj, A-Aj, A-Aj, A+Aj, A-Aj, -A-Aj, A+Aj, -A-Aj, -A-Aj, A+Aj, - A+Aj, -A-Aj, -A+Aj, -A-Aj, A-Aj, A+Aj, -A+Aj, -A+Aj, -A+Aj, A-Aj, A+Aj, -A+Aj, A+Aj, -A-Aj, A-Aj, -A-Aj, -A-Aj, A+Aj, A+Aj, -A+Aj, -A+Aj, A+Aj, A+Aj, A+Aj, A-Aj, A-Aj, -A-Aj, -A+Aj, A+Aj, -A+Aj, -A-Aj, A+Aj, -A+Aj, A-Aj, -A-Aj |
| 8 | Polarization 1 | -A+Aj, -A+Aj, A+Aj, -A-Aj, A+Aj, -A+Aj, A+Aj, -A+Aj, A+Aj, A+Aj, A-Aj, A+Aj, -A+Aj, A-Aj, -A+Aj, - A+Aj, A-Aj, -A-Aj, -A+Aj, -A-Aj, -A+Aj, A+Aj, A-Aj, -A-Aj, -A-Aj, -A-Aj, A+Aj, A-Aj, -A-Aj, A-Aj, - A+Aj, A+Aj, -A+Aj, -A+Aj, A-Aj, A-Aj, -A-Aj, -A-Aj, A-Aj, A-Aj, A-Aj, A+Aj, A+Aj, -A+Aj, -A-Aj, A-Aj, - A-Aj, -A+Aj, A-Aj, -A-Aj, A+Aj |
| | Polarization 2 | A+Aj, -A+Aj, A-Aj, -A+Aj, A+Aj, -A+Aj, A+Aj, -A+Aj, -A+Aj, -A-Aj, -A+Aj, A+Aj, -A-Aj, A+Aj, A+Aj, - A-Aj, A-Aj, A+Aj, A-Aj, A+Aj, -A+Aj, -A-Aj, A-Aj, A-Aj, A-Aj, -A+Aj, -A-Aj, A-Aj, -A-Aj, A+Aj, -A+Aj, A+Aj, A+Aj, -A-Aj, -A-Aj, A-Aj, A-Aj, -A-Aj, -A-Aj, -A-Aj, -A+Aj, -A+Aj, A+Aj, A-Aj, -A-Aj, A-Aj, A+Aj, -A-Aj, A-Aj, -A+Aj, A+Aj |
| 9 | Polarization 1 | -A+Aj, -A+Aj, A+Aj, -A-Aj, A+Aj, -A+Aj, A+Aj, -A+Aj, A+Aj, A+Aj, A-Aj, A+Aj, -A+Aj, A-Aj, -A+Aj, - A+Aj, A-Aj, -A-Aj, -A+Aj, -A-Aj, -A+Aj, A+Aj, A-Aj, -A-Aj, -A-Aj, -A-Aj, A+Aj, A-Aj, -A-Aj, A-Aj, - A+Aj, A+Aj, -A+Aj, -A+Aj, A-Aj, A-Aj, -A-Aj, -A-Aj, A-Aj, A-Aj, A-Aj, A+Aj, A+Aj, -A+Aj, -A-Aj, A-Aj, - A-Aj, -A+Aj, A-Aj, -A-Aj, A+Aj |
| | Polarization 2 | A+Aj, A+Aj, -A+Aj, A-Aj, -A+Aj, A+Aj. -A+Aj, A+Aj, -A+Aj, -A+Aj, -A-Aj, -A+Aj, A+Aj, -A-Aj, A+Aj, A+Aj, -A-Aj, A-Aj, A+Aj, A-Aj, A+Aj, -A+Aj, -A-Aj, A-Aj, A-Aj, A-Aj, -A+Aj, -A-Aj, A-Aj, -A-Aj, A+Aj, - A+Aj, A+Aj, A+Aj, -A-Aj, -A-Aj, A-Aj, A-Aj, -A-Aj, -A-Aj, -A-Aj, -A-Aj, -A+Aj, -A+Aj, A+Aj, A-Aj, -A-Aj, A-Aj, A+Aj, -A-Aj, A-Aj, -A+Aj |
| 10 | Polarization 1 | -A+Aj, A+Aj, -A-Aj, A+Aj, -A+Aj, A+Aj, -A+Aj, A+Aj, A+Aj, A-Aj, A+Aj, -A+Aj, A-Aj, -A+Aj, -A+Aj, A-Aj, -A-Aj, -A+Aj, -A-Aj, -A+Aj, A+Aj, A-Aj, -A-Aj, -A-Aj, -A-Aj, A+Aj, A-Aj, -A-Aj, A-Aj, -A+Aj, A+Aj, - A+Aj, -A+Aj, A-Aj, A-Aj, -A-Aj, -A-Aj, A-Aj, A-Aj, A-Aj, A+Aj, A+Aj, -A+Aj, -A-Aj, A-Aj, -A-Aj, -A+Aj, A-Aj, -A-Aj, A+Aj, -A+Aj |
| | Polarization 2 | -A-Aj, -A-Aj, A-Aj, -A+Aj, A-Aj, -A-Aj, A-Aj, -A-Aj, A-Aj, A-Aj, A+Aj, A-Aj, -A-Aj, A+Aj, -A-Aj, -A-Aj, A+Aj, -A+Aj, -A-Aj, -A+Aj, -A-Aj, A-Aj, A+Aj, -A+Aj, -A+Aj, -A+Aj, A-Aj, A+Aj, -A+Aj, A+Aj, -A-Aj, A-Aj, -A-Aj, -A-Aj, A+Aj, A+Aj, -A+Aj, -A+Aj, A+Aj, A+Aj, A+Aj, A-Aj, A-Aj, -A-Aj, -A+Aj, A+Aj, -A+Aj, - A-Aj, A+Aj, -A+Aj, A-Aj |

(continued)

| Index | Polarization | Pilot sequence |
|---|---|---|
| 11 | Polarization 1 | -A+Aj, A+Aj, -A-Aj, A+Aj, -A+Aj, A+Aj, -A+Aj, A+Aj, A+Aj, A-Aj, A+Aj, -A+Aj, A-Aj, -A+Aj, -A+Aj, A-Aj, -A-Aj, -A+Aj, -A-Aj, -A+Aj, A+Aj, A-Aj, -A-Aj, -A-Aj, -A-Aj, A+Aj, A-Aj, -A-Aj, A-Aj, -A+Aj, A+Aj, - A+Aj, -A+Aj, A-Aj, A-Aj, -A-Aj, -A-Aj, A-Aj, A-Aj, A-Aj, A+Aj, A+Aj, -A+Aj, -A-Aj, A-Aj, -A-Aj, -A+Aj, A-Aj, -A-Aj, A+Aj, -A+Aj |
| | Polarization 2 | A+Aj, -A+Aj, A-Aj, -A+Aj, A+Aj, -A+Aj, A+Aj, -A+Aj, -A+Aj, -A-Aj, -A+Aj, A+Aj, -A-Aj, A+Aj, A+Aj, - A-Aj, A-Aj, A+Aj, A-Aj, A+Aj, -A+Aj, -A-Aj, A-Aj, A-Aj, A-Aj, -A+Aj, -A-Aj, A-Aj, -A-Aj, A+Aj, -A+Aj, A+Aj, A+Aj, -A-Aj, -A-Aj, A-Aj, A-Aj, -A-Aj, -A-Aj, -A-Aj, -A+Aj, -A+Aj, A+Aj, A-Aj, -A-Aj, A-Aj, A+Aj, -A-Aj, A-Aj, -A+Aj, A+Aj |
| 12 | Polarization 1 | -A+Aj, A+Aj, -A-Aj, A+Aj, -A+Aj, A+Aj, -A+Aj, A+Aj, A+Aj, A-Aj, A+Aj, -A+Aj, A-Aj, -A+Aj, -A+Aj, A-Aj, -A-Aj, -A+Aj, -A-Aj, -A+Aj, A+Aj, A-Aj, -A-Aj, -A-Aj, -A-Aj, A+Aj, A-Aj, -A-Aj, A-Aj, -A+Aj, A+Aj, - A+Aj, -A+Aj, A-Aj, A-Aj, -A-Aj, -A-Aj, A-Aj, A-Aj, A-Aj, A+Aj, A+Aj, -A+Aj, -A-Aj, A-Aj, -A-Aj, -A+Aj, A-Aj, -A-Aj, A+Aj, -A+Aj |
| | Polarization 2 | A+Aj, A+Aj, -A+Aj, A-Aj, -A+Aj, A+Aj. -A+Aj, A+Aj, -A+Aj, -A+Aj, -A-Aj, -A+Aj, A+Aj, -A-Aj, A+Aj, A+Aj, -A-Aj, A-Aj, A+Aj, A-Aj, A+Aj, -A+Aj, -A-Aj, A-Aj, A-Aj, A-Aj, -A+Aj, -A-Aj, A-Aj, -A-Aj, A+Aj, - A+Aj, A+Aj, A+Aj, -A-Aj, -A-Aj, A-Aj, A-Aj, -A-Aj, -A-Aj, -A-Aj, -A+Aj, -A+Aj, A+Aj, A-Aj, -A-Aj, A-Aj, A+Aj, -A-Aj, A-Aj, -A+Aj |
| 13 | Polarization 1 | A-Aj, -A-Aj, A+Aj, -A-Aj, A-Aj, -A-Aj, A-Aj, -A-Aj, -A-Aj, -A+Aj, -A-Aj, A-Aj, -A+Aj, A-Aj, A-Aj, -A+Aj, A+Aj, A-Aj, A+Aj, A-Aj, -A-Aj, -A+Aj, A+Aj, A+Aj, A+Aj, -A-Aj, -A+Aj, A+Aj, -A+Aj, A-Aj, -A-Aj, A-Aj, A-Aj, -A+Aj, -A+Aj, A+Aj, A+Aj, -A+Aj, -A+Aj, -A+Aj, -A-Aj, -A-Aj, A-Aj, A+Aj, -A+Aj, A+Aj, A-Aj, - A+Aj, A+Aj, -A-Aj, A-Aj |
| | Polarization 2 | -A-Aj, -A-Aj, A-Aj, -A+Aj, A-Aj, -A-Aj, A-Aj, -A-Aj, A-Aj, A-Aj, A+Aj, A-Aj, -A-Aj, A+Aj, -A-Aj, -A-Aj, A+Aj, -A+Aj, -A-Aj, -A+Aj, -A-Aj, A-Aj, A+Aj, -A+Aj, -A+Aj, -A+Aj, A-Aj, A+Aj, -A+Aj, A+Aj, -A-Aj, A-Aj, -A-Aj, -A-Aj, A+Aj, A+Aj, -A+Aj, -A+Aj, A+Aj, A+Aj, A+Aj, A-Aj, A-Aj, -A-Aj, -A+Aj, A+Aj, -A+Aj, - A-Aj, A+Aj, -A+Aj, A-Aj |
| 14 | Polarization 1 | A-Aj, -A-Aj, A+Aj, -A-Aj, A-Aj, -A-Aj, A-Aj, -A-Aj, -A-Aj, -A+Aj, -A-Aj, A-Aj, -A+Aj, A-Aj, A-Aj, -A+Aj, A+Aj, A-Aj, A+Aj, A-Aj, -A-Aj, -A+Aj, A+Aj, A+Aj, A+Aj, -A-Aj, -A+Aj, A+Aj, -A+Aj, A-Aj, -A-Aj, A-Aj, A-Aj, -A+Aj, -A+Aj, A+Aj, A+Aj, -A+Aj, -A+Aj, -A+Aj, -A-Aj, -A-Aj, A-Aj, A+Aj, -A+Aj, A+Aj, A-Aj, - A+Aj, A+Aj, -A-Aj, A-Aj |
| | Polarization 2 | -A-Aj, A-Aj, -A+Aj, A-Aj, -A-Aj, A-Aj, -A-Aj, A-Aj, A-Aj, A+Aj, A-Aj, -A-Aj, A+Aj, -A-Aj, -A-Aj, A+Aj, - A+Aj, -A-Aj, -A+Aj, -A-Aj, A-Aj, A+Aj, -A+Aj, -A+Aj, -A+Aj, A-Aj, A+Aj, -A+Aj, A+Aj, -A-Aj, A-Aj, -A-Aj, -A-Aj, A+Aj, A+Aj, -A+Aj, -A+Aj, A+Aj, A+Aj, A+Aj, A-Aj, A-Aj, -A-Aj, -A+Aj, A+Aj, -A+Aj, -A-Aj, A+Aj, -A+Aj, A-Aj, -A-Aj |
| 15 | Polarization 1 | A-Aj, -A-Aj, A+Aj, -A-Aj, A-Aj, -A-Aj, A-Aj, -A-Aj, -A-Aj, -A+Aj, -A-Aj, A-Aj, -A+Aj, A-Aj, A-Aj, -A+Aj, A+Aj, A-Aj, A+Aj, A-Aj, -A-Aj, -A+Aj, A+Aj, A+Aj, A+Aj, -A-Aj, -A+Aj, A+Aj, -A+Aj, A-Aj, -A-Aj, A-Aj, A-Aj, -A+Aj, -A+Aj, A+Aj, A+Aj, -A+Aj, -A+Aj, -A+Aj, -A-Aj, -A-Aj, A-Aj, A+Aj, -A+Aj, A+Aj, A-Aj, - A+Aj, A+Aj, -A-Aj, A-Aj |
| | Polarization 2 | A+Aj, A+Aj, -A+Aj, A-Aj, -A+Aj, A+Aj. -A+Aj, A+Aj, -A+Aj, -A+Aj, -A-Aj, -A+Aj, A+Aj, -A-Aj, A+Aj, A+Aj, -A-Aj, A-Aj, A+Aj, A-Aj, A+Aj, -A+Aj, -A-Aj, A-Aj, A-Aj, A-Aj, -A+Aj, -A-Aj, A-Aj, -A-Aj, A-Aj, A+Aj, - A+Aj, A+Aj, A+Aj, -A-Aj, -A-Aj, A-Aj, A-Aj, -A-Aj, -A-Aj, -A-Aj, -A-Aj, -A+Aj, -A+Aj, A+Aj, A-Aj, -A-Aj, A-Aj, A+Aj, -A-Aj, A-Aj, -A+Aj |
| 16 | Polarization 1 | A-Aj, A-Aj, -A-Aj, A+Aj, -A-Aj, A-Aj, -A-Aj, A-Aj, -A-Aj, -A-Aj, -A+Aj, -A-Aj, A-Aj, -A+Aj, A-Aj, A-Aj, - A+Aj, A+Aj, A-Aj, A+Aj, A-Aj, -A-Aj, -A+Aj, A+Aj, A+Aj, A+Aj, -A-Aj, -A+Aj, A+Aj, -A+Aj, A-Aj, -A-Aj, A-Aj, A-Aj, -A+Aj, -A+Aj, A+Aj, A+Aj, -A+Aj, -A+Aj, -A+Aj, -A-Aj, -A-Aj, A-Aj, A+Aj, -A+Aj, A+Aj, A-Aj, -A+Aj, A+Aj, -A-Aj |
| | Polarization 2 | -A-Aj, -A-Aj, A-Aj, -A+Aj, A-Aj, -A-Aj, A-Aj, -A-Aj, A-Aj, A-Aj, A+Aj, A-Aj, -A-Aj, A+Aj, -A-Aj, -A-Aj, A+Aj, -A+Aj, -A-Aj, -A+Aj, -A-Aj, A-Aj, A+Aj, -A+Aj, -A+Aj, -A+Aj, A-Aj, A+Aj, -A+Aj, A+Aj, -A-Aj, A-Aj, -A-Aj, -A-Aj, A+Aj, A+Aj, -A+Aj, -A+Aj, A+Aj, A+Aj, A+Aj, A-Aj, A-Aj, -A-Aj, -A+Aj, A+Aj, -A+Aj, - A-Aj, A+Aj, -A+Aj, A-Aj |

(continued)

| Index | Polarization | Pilot sequence |
|---|---|---|
| 17 | Polarization 1 | A-Aj, A-Aj, -A-Aj, A+Aj, -A-Aj, A-Aj, -A-Aj, A-Aj, -A-Aj, -A-Aj, -A+Aj, -A-Aj, A-Aj, -A+Aj, A-Aj, A-Aj, - A+Aj, A+Aj, A-Aj, A+Aj, A-Aj, -A-Aj, -A+Aj, A+Aj, A+Aj, A+Aj, -A-Aj, -A+Aj, A+Aj, -A+Aj, A-Aj, -A-Aj, A-Aj, A-Aj, -A+Aj, -A+Aj, A+Aj, A+Aj, -A+Aj, -A+Aj, -A+Aj, -A-Aj, -A-Aj, A-Aj, A+Aj, -A+Aj, A+Aj, A-Aj, -A+Aj, A+Aj, -A-Aj |
| | Polarization 2 | -A-Aj, A-Aj, -A+Aj, A-Aj, -A-Aj, A-Aj, -A-Aj, A-Aj, A-Aj, A+Aj, A-Aj, -A-Aj, A+Aj, -A-Aj, -A-Aj, A+Aj, - A+Aj, -A-Aj, -A+Aj, -A-Aj, A-Aj, A+Aj, -A+Aj, -A+Aj, -A+Aj, A-Aj, A+Aj, -A+Aj, A+Aj, -A-Aj, A-Aj, -A-Aj, -A-Aj, A+Aj, A+Aj, -A+Aj, -A+Aj, A+Aj, A+Aj, A+Aj, A-Aj, A-Aj, -A-Aj, -A+Aj, A+Aj, -A+Aj, -A-Aj, A+Aj, -A+Aj, A-Aj, -A-Aj |
| 18 | Polarization 1 | A-Aj, A-Aj, -A-Aj, A+Aj, -A-Aj, A-Aj, -A-Aj, A-Aj, -A-Aj, -A-Aj, -A+Aj, -A-Aj, A-Aj, -A+Aj, A-Aj, A-Aj, - A+Aj, A+Aj, A-Aj, A+Aj, A-Aj, -A-Aj, -A+Aj, A+Aj, A+Aj, A+Aj, -A-Aj, -A+Aj, A+Aj, -A+Aj, A-Aj, -A-Aj, A-Aj, A-Aj, -A+Aj, -A+Aj, A+Aj, A+Aj, -A+Aj, -A+Aj, -A+Aj, -A-Aj, -A-Aj, A-Aj, A+Aj, -A+Aj, A+Aj, A-Aj, -A+Aj, A+Aj, -A-Aj |
| | Polarization 2 | A+Aj, -A+Aj, A-Aj, -A+Aj, A+Aj, -A+Aj, A+Aj, -A+Aj, -A+Aj, -A-Aj, -A+Aj, A+Aj, -A-Aj, A+Aj, A+Aj, - A-Aj, A-Aj, A+Aj, A-Aj, A+Aj, -A+Aj, -A-Aj, A-Aj, A-Aj, A-Aj, -A+Aj, -A-Aj, A-Aj, -A-Aj, A+Aj, -A+Aj, A+Aj, A+Aj, -A-Aj, -A-Aj, A-Aj, A-Aj, -A-Aj, -A-Aj, -A-Aj, -A+Aj, -A+Aj, A+Aj, A-Aj, -A-Aj, A-Aj, A+Aj, -A-Aj, A-Aj, -A+Aj, A+Aj |
| 19 | Polarization 1 | -A+Aj, -A-Aj, A+Aj, A-Aj, -A+Aj, A+Aj. A-Aj, A+Aj, -A+Aj, -A-Aj, -A-Aj, A-Aj, A-Aj, A-Aj, A+Aj, A+Aj, A-Aj, A-Aj, -A+Aj, -A+Aj, -A-Aj, -A+Aj, A-Aj, A+Aj, A-Aj, -A-Aj, A+Aj, A+Aj, A+Aj, A-Aj, -A-Aj, -A+Aj, A+Aj, -A+Aj, A+Aj, A-Aj, -A+Aj, -A+Aj, A-Aj, -A+Aj, -A-Aj, A-Aj, -A-Aj, -A-Aj, -A+Aj, -A-Aj, -A+Aj, - A-Aj, A+Aj, -A-Aj, -A+Aj |
| | Polarization 2 | -A-Aj, -A+Aj, A-Aj, A+Aj, -A-Aj, A-Aj, A+Aj, A-Aj, -A-Aj, -A+Aj, -A+Aj, A+Aj, A+Aj, A+Aj, A-Aj, A-Aj, A+Aj, A+Aj, -A-Aj, -A-Aj, -A+Aj, -A-Aj, A+Aj, A-Aj, A+Aj, -A+Aj, A-Aj, A-Aj, A-Aj, A+Aj, -A+Aj, -A-Aj, A-Aj, -A-Aj, A-Aj, A+Aj, -A-Aj, -A-Aj, A+Aj, -A-Aj, -A+Aj, A+Aj, -A+Aj, -A+Aj, -A-Aj, -A+Aj, -A-Aj, - A+Aj, A-Aj, -A+Aj, -A-Aj |
| 20 | Polarization 1 | -A+Aj, -A-Aj, A+Aj, A-Aj, -A+Aj, A+Aj. A-Aj, A+Aj, -A+Aj, -A-Aj, -A-Aj, A-Aj, A-Aj, A-Aj, A+Aj, A+Aj, A-Aj, A-Aj, -A+Aj, -A+Aj, -A-Aj, -A+Aj, A-Aj, A+Aj, A-Aj, -A-Aj, A+Aj, A+Aj, A+Aj, A-Aj, -A-Aj, -A+Aj, A+Aj, -A+Aj, A+Aj, A-Aj, -A+Aj, -A+Aj, A-Aj, -A+Aj, -A-Aj, A-Aj, -A-Aj, -A-Aj, -A+Aj, -A-Aj, -A+Aj, - A-Aj, A+Aj, -A-Aj, -A+Aj |
| | Polarization 2 | A+Aj, A-Aj, -A+Aj, -A-Aj, A+Aj, -A+Aj, -A-Aj, -A+Aj, A+Aj, A-Aj, A-Aj, -A-Aj, -A-Aj, -A-Aj, -A+Aj, - A+Aj, -A-Aj, -A-Aj, A+Aj, A+Aj, A-Aj, A+Aj, -A-Aj, -A+Aj, -A-Aj, A-Aj, -A+Aj, -A+Aj, -A+Aj, -A-Aj, A-Aj, A+Aj, -A+Aj, A+Aj, -A+Aj, -A-Aj, A+Aj, A+Aj, -A-Aj, A+Aj, A-Aj, -A-Aj, A-Aj, A-Aj, A+Aj, A-Aj, A+Aj, A-Aj, -A+Aj, A-Aj, A+Aj |
| 21 | Polarization 1 | -A+Aj, -A-Aj, A+Aj, A-Aj, -A+Aj, A+Aj. A-Aj, A+Aj, -A+Aj, -A-Aj, -A-Aj, A-Aj, A-Aj, A-Aj, A+Aj, A+Aj, A-Aj, A-Aj, -A+Aj, -A+Aj, -A-Aj, -A+Aj, A-Aj, A+Aj, A-Aj, -A-Aj, A+Aj, A+Aj, A+Aj, A-Aj, -A-Aj, -A+Aj, A+Aj, -A+Aj, A+Aj, A-Aj, -A+Aj, -A+Aj, A-Aj, -A+Aj, -A-Aj, A-Aj, -A-Aj, -A-Aj, -A+Aj, -A-Aj, -A+Aj, - A-Aj, A+Aj, -A-Aj, -A+Aj |
| | Polarization 2 | A+Aj, A+Aj, A-Aj, -A+Aj, -A-Aj, A+Aj, -A+Aj, -A-Aj, -A+Aj, A+Aj, A-Aj, A-Aj, -A-Aj, -A-Aj, -A-Aj, - A+Aj, -A+Aj, -A-Aj, -A-Aj, A+Aj, A+Aj, A-Aj, A+Aj, -A-Aj, -A+Aj, -A-Aj, A-Aj, -A+Aj, -A+Aj, -A+Aj, -A-Aj, A-Aj, A+Aj, -A+Aj, A+Aj, -A+Aj, -A-Aj, A+Aj, A+Aj, -A-Aj, A+Aj, A-Aj, -A-Aj, A-Aj, A-Aj, A+Aj, A-Aj, A+Aj, A-Aj, -A+Aj, A-Aj |
| 22 | Polarization 1 | -A+Aj, -A+Aj, -A-Aj, A+Aj, A-Aj, -A+Aj, A+Aj, A-Aj, A+Aj, -A+Aj, -A-Aj, -A-Aj, A-Aj, A-Aj, A-Aj, A+Aj, A+Aj, A-Aj, A-Aj, -A+Aj, -A+Aj, -A-Aj, -A+Aj, A-Aj, A+Aj, A-Aj, -A-Aj, A+Aj, A+Aj, A+Aj, A-Aj, -A-Aj, - A+Aj, A+Aj, -A+Aj, A+Aj, A-Aj, -A+Aj. -A+Aj, A-Aj, -A+Aj, -A-Aj, A-Aj, -A-Aj, -A+Aj, -A-Aj, - A+Aj, -A-Aj, A+Aj, -A-Aj |
| | Polarization 2 | -A-Aj, -A-Aj, -A+Aj, A-Aj, A+Aj, -A-Aj. A-Aj, A+Aj, A-Aj, -A-Aj, -A+Aj, -A+Aj, A+Aj, A+Aj, A+Aj, A-Aj, A-Aj, A+Aj, A+Aj, -A-Aj, -A-Aj, -A+Aj, -A-Aj, A+Aj, A-Aj, A+Aj, -A+Aj, A-Aj, A-Aj, A-Aj, A+Aj, -A+Aj, - A-Aj, A-Aj, -A-Aj, A-Aj, A+Aj, -A-Aj, -A-Aj, A+Aj, -A-Aj, -A+Aj, A+Aj, -A+Aj, -A+Aj, -A-Aj, -A+Aj, -A-Aj, -A+Aj, A-Aj, -A+Aj |

(continued)

| Index | Polarization | Pilot sequence |
|---|---|---|
| 23 | Polarization 1 | -A+Aj, -A+Aj, -A-Aj, A+Aj, A-Aj, -A+Aj, A+Aj, A-Aj, A+Aj, -A+Aj, -A-Aj, -A-Aj, A-Aj, A-Aj, A-Aj, A+Aj, A+Aj, A-Aj, A-Aj, -A+Aj, -A+Aj, -A-Aj, -A+Aj, A-Aj, A+Aj, A-Aj, -A-Aj, A+Aj, A+Aj, A+Aj, A-Aj, -A-Aj, - A+Aj, A+Aj, -A+Aj, A+Aj, A-Aj, -A+Aj. -A+Aj, A-Aj, -A+Aj, -A-Aj, A-Aj, -A-Aj, -A-Aj, -A+Aj, -A-Aj, - A+Aj, -A-Aj, A+Aj, -A-Aj |
| | Polarization 2 | A+Aj, A-Aj, -A+Aj, -A-Aj, A+Aj, -A+Aj, -A-Aj, -A+Aj, A+Aj, A-Aj, A-Aj, -A-Aj, -A-Aj, -A-Aj, -A+Aj, - A+Aj, -A-Aj, -A-Aj, A+Aj, A+Aj, A-Aj, A+Aj, -A-Aj, -A+Aj, -A-Aj, A-Aj, -A+Aj, -A+Aj, -A+Aj, -A-Aj, A-Aj, A+Aj, -A+Aj, A+Aj, -A+Aj, -A-Aj, A+Aj, A+Aj, -A-Aj, A+Aj, A-Aj, -A-Aj, A-Aj, A-Aj, A+Aj, A-Aj, A+Aj, A-Aj, -A+Aj, A-Aj, A+Aj |
| 24 | Polarization 1 | -A+Aj, -A+Aj, -A-Aj, A+Aj, A-Aj, -A+Aj, A+Aj, A-Aj, A+Aj, -A+Aj, -A-Aj, -A-Aj, A-Aj, A-Aj, A-Aj, A+Aj, A+Aj, A-Aj, A-Aj, -A+Aj, -A+Aj, -A-Aj, -A+Aj, A-Aj, A+Aj, A-Aj, -A-Aj, A+Aj, A+Aj, A+Aj, A-Aj, -A-Aj, - A+Aj, A+Aj, -A+Aj, A+Aj, A-Aj, -A+Aj. -A+Aj, A-Aj, -A+Aj, -A-Aj, A-Aj, -A-Aj, -A-Aj, -A+Aj, -A-Aj, - A+Aj, -A-Aj, A+Aj, -A-Aj |
| | Polarization 2 | A+Aj, A+Aj, A-Aj, -A+Aj, -A-Aj, A+Aj, -A+Aj, -A-Aj, -A+Aj, A+Aj, A-Aj, A-Aj, -A-Aj, -A-Aj, -A-Aj, - A+Aj, -A+Aj, -A-Aj, -A-Aj, A+Aj, A+Aj, A-Aj, A+Aj, -A-Aj, -A+Aj, -A-Aj, A-Aj, -A+Aj, -A+Aj, -A+Aj, -A-Aj, A-Aj, A+Aj, -A+Aj, A+Aj, -A+Aj, -A-Aj, A+Aj, A+Aj, -A-Aj, A+Aj, A-Aj, -A-Aj, A-Aj, A-Aj, A+Aj, A-Aj, A+Aj, A-Aj, -A+Aj, A-Aj |
| 25 | Polarization 1 | A-Aj, A-Aj, A+Aj, -A-Aj, -A+Aj, A-Aj, -A-Aj, -A+Aj, -A-Aj, A-Aj, A+Aj, A+Aj, -A+Aj, -A+Aj, -A+Aj, -A-Aj, -A-Aj, -A+Aj, -A+Aj, A-Aj, A-Aj, A+Aj, A-Aj, -A+Aj, -A-Aj, -A+Aj, A+Aj, -A-Aj, -A-Aj, -A-Aj, -A+Aj, A+Aj, A-Aj, -A-Aj, A-Aj, -A-Aj, -A+Aj, A-Aj, A-Aj, -A+Aj, A-Aj, A+Aj, -A+Aj, A+Aj, A+Aj, A-Aj, A+Aj, A-Aj, A+Aj, -A-Aj, A+Aj |
| | Polarization 2 | -A-Aj, -A-Aj, -A+Aj, A-Aj, A+Aj, -A-Aj. A-Aj, A+Aj, A-Aj, -A-Aj, -A+Aj, -A+Aj, A+Aj, A+Aj, A+Aj, A-Aj, A-Aj, A+Aj, A+Aj, -A-Aj, -A-Aj, -A+Aj, -A-Aj, A+Aj, A-Aj, A+Aj, -A+Aj, A-Aj, A-Aj, A-Aj, A+Aj, -A+Aj, - A-Aj, A-Aj, -A-Aj, A-Aj, A+Aj, -A-Aj, -A-Aj, A+Aj, -A-Aj, -A+Aj, A+Aj, -A+Aj, -A+Aj, -A-Aj, -A+Aj, -A-Aj, -A+Aj, A-Aj, -A+Aj |
| 26 | Polarization 1 | A-Aj, A-Aj, A+Aj, -A-Aj, -A+Aj, A-Aj, -A-Aj, -A+Aj, -A-Aj, A-Aj, A+Aj, A+Aj, -A+Aj, -A+Aj, -A+Aj, -A-Aj, -A-Aj, -A+Aj, -A+Aj, A-Aj, A-Aj, A+Aj, A-Aj, -A+Aj, -A-Aj, -A+Aj, A+Aj, -A-Aj, -A-Aj, -A-Aj, -A+Aj, A+Aj, A-Aj, -A-Aj, A-Aj, -A-Aj, -A+Aj, A-Aj, A-Aj, -A+Aj, A-Aj, A+Aj, -A+Aj, A+Aj, A+Aj, A-Aj, A+Aj, A-Aj, A+Aj, -A-Aj, A+Aj |
| | Polarization 2 | -A-Aj, -A+Aj, A-Aj, A+Aj, -A-Aj, A-Aj, A+Aj, A-Aj, -A-Aj, -A+Aj, -A+Aj, A+Aj, A+Aj, A+Aj, A-Aj, A-Aj, A+Aj, A+Aj, -A-Aj, -A-Aj, -A+Aj, -A-Aj, A+Aj, A-Aj, A+Aj, -A+Aj, A-Aj, A-Aj, A-Aj, A+Aj, -A+Aj, -A-Aj, A-Aj, -A-Aj, A-Aj, A+Aj, -A-Aj, -A-Aj, A+Aj, -A-Aj, -A+Aj, A+Aj, -A+Aj, -A+Aj, -A-Aj, -A+Aj, -A-Aj, - A+Aj, A-Aj, -A+Aj, -A-Aj |
| 27 | Polarization 1 | A-Aj, A-Aj, A+Aj, -A-Aj, -A+Aj, A-Aj, -A-Aj, -A+Aj, -A-Aj, A-Aj, A+Aj, A+Aj, -A+Aj, -A+Aj, -A+Aj, -A-Aj, -A-Aj, -A+Aj, -A+Aj, A-Aj, A-Aj, A+Aj, A-Aj, -A+Aj, -A-Aj, -A+Aj, A+Aj, -A-Aj, -A-Aj, -A-Aj, -A+Aj, A+Aj, A-Aj, -A-Aj, A-Aj, -A-Aj, -A+Aj, A-Aj, A-Aj, -A+Aj, A-Aj, A+Aj, -A+Aj, A+Aj, A+Aj, A-Aj, A+Aj, A-Aj, A+Aj, -A-Aj, A+Aj |
| | Polarization 2 | A+Aj, A+Aj, A-Aj, -A+Aj, -A-Aj, A+Aj, -A+Aj, -A-Aj, -A+Aj, A+Aj, A-Aj, A-Aj, -A-Aj, -A-Aj, -A-Aj, - A+Aj, -A+Aj, -A-Aj, -A-Aj, A+Aj, A+Aj, A-Aj, A+Aj, -A-Aj, -A+Aj, -A-Aj, A-Aj, -A+Aj, -A+Aj, -A+Aj, -A-Aj, A-Aj, A+Aj, -A+Aj, A+Aj, -A+Aj, -A-Aj, A+Aj, A+Aj, -A-Aj, A+Aj, A-Aj, -A-Aj, A-Aj, A-Aj, A+Aj, A-Aj, A+Aj, A-Aj, -A+Aj, A-Aj |
| 28 | Polarization 1 | A-Aj, A+Aj, -A-Aj, -A+Aj, A-Aj, -A-Aj, -A+Aj, -A-Aj, A-Aj, A+Aj, A+Aj, -A+Aj, -A+Aj, -A+Aj, -A-Aj, -A-Aj, -A+Aj, -A+Aj, A-Aj, A-Aj, A+Aj, A-Aj, -A+Aj, -A-Aj, -A+Aj, A+Aj, -A-Aj, -A-Aj, -A-Aj, -A+Aj, A+Aj, A-Aj, -A-Aj, A-Aj, -A-Aj, -A+Aj, A-Aj, A-Aj, -A+Aj, A-Aj, A+Aj, -A+Aj, A+Aj, A+Aj, A-Aj, A+Aj, A-Aj, A+Aj, -A-Aj, A+Aj, A-Aj |
| | Polarization 2 | -A-Aj, -A-Aj, -A+Aj, A-Aj, A+Aj, -A-Aj. A-Aj, A+Aj, A-Aj, -A-Aj, -A+Aj, -A+Aj, A+Aj, A+Aj, A+Aj, A-Aj, A-Aj, A+Aj, A+Aj, -A-Aj, -A-Aj, -A+Aj, -A-Aj, A+Aj, A-Aj, A+Aj, -A+Aj, A-Aj, A-Aj, A-Aj, A+Aj, -A+Aj, - A-Aj, A-Aj, -A-Aj, A-Aj, A+Aj, -A-Aj, -A-Aj, A+Aj, -A-Aj, -A+Aj, A+Aj, -A-Aj, -A+Aj, -A-Aj, -A+Aj, -A+Aj, -A-Aj, -A+Aj, A-Aj, -A+Aj |

(continued)

| Index | Polarization | Pilot sequence |
|---|---|---|
| 29 | Polarization 1 | A-Aj, A+Aj, -A-Aj, -A+Aj, A-Aj, -A-Aj, -A+Aj, -A-Aj, A-Aj, A+Aj, A+Aj, -A+Aj, -A+Aj, -A+Aj, -A-Aj, -A-Aj, -A+Aj, -A+Aj, A-Aj, A-Aj, A+Aj, A-Aj, -A+Aj, -A-Aj, -A+Aj, A+Aj, -A-Aj, -A-Aj, -A-Aj, -A+Aj, A+Aj, A-Aj, -A-Aj, A-Aj, -A-Aj, -A+Aj, A-Aj, A-Aj, -A+Aj, A-Aj, A+Aj, -A+Aj, A+Aj, A+Aj, A-Aj, A+Aj, A-Aj, A+Aj, -A-Aj, A+Aj, A-Aj |
| | Polarization 2 | -A-Aj, -A+Aj, A-Aj, A+Aj, -A-Aj, A-Aj, A+Aj, A-Aj, -A-Aj, -A+Aj, -A+Aj, A+Aj, A+Aj, A+Aj, A-Aj, A-Aj, A+Aj, A+Aj, -A-Aj, -A-Aj, -A+Aj, -A-Aj, A+Aj, A-Aj, A+Aj, -A+Aj, A-Aj, A-Aj, A-Aj, A+Aj, -A+Aj, -A-Aj, A-Aj, -A-Aj, A-Aj, A+Aj, -A-Aj, -A-Aj, A+Aj, -A-Aj, -A+Aj, A+Aj, -A+Aj, -A+Aj, -A-Aj, -A+Aj, -A-Aj, - A+Aj, A-Aj, -A+Aj, -A-Aj |
| 30 | Polarization 1 | A-Aj, A+Aj, -A-Aj, -A+Aj, A-Aj, -A-Aj, -A+Aj, -A-Aj, A-Aj, A+Aj, A+Aj, -A+Aj, -A+Aj, -A+Aj, -A-Aj, -A-Aj, -A+Aj, -A+Aj, A-Aj, A-Aj, A+Aj, A-Aj, -A+Aj, -A-Aj, -A+Aj, A+Aj, -A-Aj, -A-Aj, -A-Aj, -A+Aj, A+Aj, A-Aj, -A-Aj, A-Aj, -A-Aj, -A+Aj, A-Aj, A-Aj, -A+Aj, A-Aj, A+Aj, -A+Aj, A+Aj, A+Aj, A-Aj, A+Aj, A-Aj, A+Aj, -A-Aj, A+Aj, A-Aj |
| | Polarization 2 | A+Aj, A-Aj, -A+Aj, -A-Aj, A+Aj, -A+Aj, -A-Aj, -A+Aj, A+Aj, A-Aj, A-Aj, -A-Aj, -A-Aj, -A-Aj, -A+Aj, - A+Aj, -A-Aj, -A-Aj, A+Aj, A+Aj, A-Aj, A+Aj, -A-Aj, -A+Aj, -A-Aj, A-Aj, -A+Aj, -A+Aj, -A+Aj, -A-Aj, A-Aj, A+Aj, -A+Aj, A+Aj, -A+Aj, -A-Aj, A+Aj, A+Aj, -A-Aj, A+Aj, A-Aj, -A-Aj, A-Aj, A-Aj, A+Aj, A-Aj, A+Aj, A-Aj, -A+Aj, A-Aj, A+Aj |
| 31 | Polarization 1 | A+Aj, A+Aj, -A+Aj, A-Aj, -A-Aj, -A+Aj, A+Aj, A-Aj, A+Aj, A-Aj, -A+Aj, -A+Aj, A+Aj, A-Aj, A-Aj, A-Aj, A-Aj, -A+Aj, A-Aj, -A-Aj, -A+Aj, A-Aj, A+Aj, -A+Aj, -A-Aj, A-Aj, -A-Aj, -A+Aj, -A-Aj, -A+Aj, -A+Aj, A+Aj, A-Aj, -A-Aj, -A+Aj, A+Aj, -A-Aj, -A-Aj, A+Aj, -A-Aj, A+Aj, -A-Aj, A+Aj, A+Aj, -A+Aj, -A-Aj, A-Aj, -A+Aj, -A-Aj, A-Aj, A+Aj |
| | Polarization 2 | -A+Aj, -A-Aj, -A-Aj, -A+Aj, -A+Aj, A+Aj, A+Aj, -A+Aj, A+Aj, -A+Aj, A+Aj, -A+Aj, -A+Aj, A-Aj, -A-Aj, A+Aj, A-Aj, -A-Aj, A+Aj, -A+Aj, -A-Aj, A+Aj, A+Aj, -A-Aj, A+Aj, A+Aj, A-Aj, A-Aj, -A+Aj, A-Aj, -A+Aj, -A-Aj, -A-Aj, -A+Aj, A-Aj, -A+Aj, -A-Aj, A-Aj, A-Aj, A+Aj, -A-Aj, A-Aj, -A+Aj, A+Aj, A-Aj, A+Aj, -A-Aj, A-Aj, -A-Aj, A-Aj, -A-Aj |
| 32 | Polarization 1 | A+Aj, -A+Aj, -A-Aj, A-Aj, -A+Aj, -A-Aj, A-Aj, A+Aj, A+Aj, -A-Aj, A+Aj, -A-Aj, A+Aj, -A-Aj, -A-Aj, A+Aj, A-Aj, -A-Aj, -A+Aj, A+Aj, A-Aj, A-Aj, -A-Aj, A-Aj, -A-Aj, -A+Aj, -A-Aj, A-Aj, A+Aj, -A+Aj, A-Aj, - A-Aj, -A+Aj, A-Aj, -A+Aj, -A+Aj, -A+Aj, -A+Aj, A+Aj, A-Aj, A-Aj, -A+Aj, A+Aj, -A+Aj, A+Aj, A-Aj, -A-Aj, -A+Aj, A-Aj, A+Aj, A+Aj |
| | Polarization 2 | A-Aj, -A-Aj, -A+Aj, -A-Aj, -A+Aj, -A-Aj, A+Aj, -A+Aj, A+Aj, A-Aj, -A+Aj, -A-Aj, A+Aj, -A+Aj, -A+Aj, - A-Aj, A-Aj, -A+Aj, A-Aj, -A-Aj, -A-Aj, A-Aj, -A+Aj, A-Aj, -A+Aj, -A+Aj, A+Aj, A+Aj, -A-Aj, A+Aj, A+Aj, -A-Aj, A-Aj, A+Aj, -A-Aj, -A+Aj, A+Aj, -A-Aj, -A+Aj, A-Aj, A-Aj, A+Aj, A-Aj, A+Aj, A-Aj, A+Aj, A+Aj, A-Aj, A-Aj, -A-Aj, -A-Aj |
| 33 | Polarization 1 | A+Aj, -A+Aj, -A-Aj, A-Aj, -A+Aj, -A-Aj, A-Aj, A+Aj, A+Aj, -A-Aj, A+Aj, -A-Aj, A+Aj, -A-Aj, -A-Aj, A+Aj, A-Aj, -A-Aj, -A+Aj, A+Aj, A-Aj, A-Aj, -A-Aj, A-Aj, -A-Aj, -A+Aj, -A-Aj, A-Aj, A+Aj, -A+Aj, A-Aj, - A-Aj, -A+Aj, A-Aj, -A+Aj, -A+Aj, -A+Aj, -A+Aj, A+Aj, A-Aj, A-Aj, -A+Aj, A+Aj, -A+Aj, A+Aj, A-Aj, -A-Aj, -A+Aj, A-Aj, A+Aj, A+Aj |
| | Polarization 2 | A+Aj, -A-Aj, -A-Aj, A-Aj, -A-Aj, A-Aj, -A+Aj, A-Aj, A+Aj, A+Aj, -A-Aj, A-Aj, -A+Aj, A-Aj, A-Aj, A-Aj, - A+Aj, -A-Aj, A+Aj, -A-Aj, -A-Aj, -A+Aj, -A-Aj, A+Aj, -A-Aj, A-Aj, A+Aj, A+Aj, A-Aj, -A+Aj, A+Aj, A-Aj, -A+Aj, -A+Aj, A-Aj, -A-Aj, A+Aj, A-Aj, -A-Aj, A+Aj, -A+Aj, -A+Aj, A+Aj, -A+Aj, A+Aj, -A+Aj, A+Aj, A+Aj, -A+Aj, -A-Aj, -A-Aj |

(16) When $N_{PS}$ = 61, if a remainder of $N_{TS}$ divided by 4 is 0, the pilot sequence is one item in the following Table 23-1. If a remainder of $N_{TS}$ divided by 4 is 2, the pilot sequence is one item in the following Table 23-1 or Table 23-2.

**Table 23-1**

| Index | Polarization | Pilot sequence |
|---|---|---|
| 1 | Polarization 1 | -A-Aj, A+Aj, -A+Aj, A+Aj, A-Aj, A-Aj, -A-Aj, A-Aj, -A+Aj, A+Aj, -A+Aj, A+Aj, -A+Aj, -A-Aj, A+Aj, A+Aj, A-Aj, -A-Aj, -A+Aj, -A-Aj, A-Aj, A+Aj, -A+Aj, -A+Aj, A+Aj, -A-Aj, A+Aj, A-Aj, -A+Aj, -A+Aj, A+Aj, A+Aj, -A+Aj, -A+Aj, -A-Aj, A-Aj, -A-Aj, A+Aj, A-Aj, A-Aj, A+Aj, -A-Aj, A-Aj, A-Aj, A-Aj, -A-Aj, - A+Aj, A+Aj, -A-Aj, -A-Aj, -A-Aj, A-Aj, -A-Aj, -A-Aj, -A-Aj, -A+Aj, A-Aj, A+Aj, -A+Aj, A-Aj, -A+Aj |
| | Polarization 2 | -A+Aj, A-Aj, -A-Aj, A-Aj, A+Aj, A+Aj, -A+Aj, A+Aj, -A-Aj, A-Aj, -A-Aj, A-Aj, -A-Aj, -A+Aj, A-Aj, A-Aj, A+Aj, -A+Aj, -A-Aj, -A+Aj, A+Aj, A-Aj, -A-Aj, -A-Aj, A-Aj, -A+Aj, A-Aj, A+Aj, -A-Aj, -A-Aj, A-Aj, A-Aj, -A-Aj, -A-Aj, -A+Aj, A+Aj, -A+Aj, A-Aj, A+Aj, A+Aj, A-Aj, -A+Aj, A+Aj, A+Aj, A+Aj, -A+Aj, -A-Aj, A-Aj, -A+Aj, -A+Aj, -A+Aj, A+Aj, -A+Aj, -A+Aj, -A+Aj, -A-Aj, A+Aj, A-Aj, -A-Aj, A+Aj, -A-Aj |
| 2 | Polarization 1 | -A-Aj, A+Aj, -A+Aj, A+Aj, A-Aj, A-Aj, -A-Aj, A-Aj, -A+Aj, A+Aj, -A+Aj, A+Aj, -A+Aj, -A-Aj, A+Aj, A+Aj, A-Aj, -A-Aj, -A+Aj, -A-Aj, A-Aj, A+Aj, -A+Aj, -A+Aj, A+Aj, -A-Aj, A+Aj, A-Aj, -A+Aj, -A+Aj, A+Aj, A+Aj, -A+Aj, -A+Aj, -A-Aj, A-Aj, -A-Aj, A+Aj, A-Aj, A-Aj, A+Aj, -A-Aj, A-Aj, A-Aj, A-Aj, -A-Aj, - A+Aj, A+Aj, -A-Aj, -A-Aj, -A-Aj, A-Aj, -A-Aj, -A-Aj, -A-Aj, -A+Aj, A-Aj, A+Aj, -A+Aj, A-Aj, -A+Aj |
| | Polarization 2 | A-Aj, -A+Aj, A+Aj, -A+Aj, -A-Aj, -A-Aj. A-Aj, -A-Aj, A+Aj, -A+Aj, A+Aj, -A+Aj, A+Aj, A-Aj, -A+Aj, - A+Aj, -A-Aj, A-Aj, A+Aj, A-Aj, -A-Aj, -A+Aj, A+Aj, A+Aj, -A+Aj, A-Aj, -A+Aj, -A-Aj, A+Aj, A+Aj, - A+Aj, -A+Aj, A+Aj, A+Aj, A-Aj, -A-Aj, A-Aj, -A+Aj, -A-Aj, -A-Aj, -A+Aj, A-Aj, -A-Aj, -A-Aj, -A-Aj, A-Aj, A+Aj, -A+Aj, A-Aj, A-Aj, A-Aj, -A-Aj, A-Aj, A-Aj, A-Aj, A+Aj, -A-Aj, -A+Aj, A+Aj, -A-Aj, A+Aj |
| 3 | Polarization 1 | -A+Aj, A-Aj, -A-Aj, A-Aj, A+Aj, A+Aj, -A+Aj, A+Aj, -A-Aj, A-Aj, -A-Aj, A-Aj, -A-Aj, -A+Aj, A-Aj, A-Aj, A+Aj, -A+Aj, -A-Aj, -A+Aj, A+Aj, A-Aj, -A-Aj, -A-Aj, A-Aj, -A+Aj, A-Aj, A+Aj, -A-Aj, -A-Aj, A-Aj, A-Aj, -A-Aj, -A-Aj, -A+Aj, A+Aj, -A+Aj, A-Aj, A+Aj, A+Aj, A-Aj, -A+Aj, A+Aj, A+Aj, A+Aj, -A+Aj, -A-Aj, A-Aj, -A+Aj, -A+Aj, -A+Aj, A+Aj, -A+Aj, -A+Aj, -A+Aj, -A-Aj, A+Aj, A-Aj, -A-Aj, A+Aj, -A-Aj |
| | Polarization 2 | A+Aj, -A-Aj, A-Aj, -A-Aj, -A+Aj, -A+Aj. A+Aj, -A+Aj, A-Aj, -A-Aj, A-Aj, -A-Aj, A-Aj, A+Aj, -A-Aj, -A-Aj, -A+Aj, A+Aj, A-Aj, A+Aj, -A+Aj, -A-Aj, A-Aj, A-Aj, -A-Aj, A+Aj, -A-Aj, -A+Aj, A-Aj, A-Aj, -A-Aj, -A-Aj, A-Aj, A-Aj, A+Aj, -A+Aj, A+Aj, -A-Aj, -A+Aj, -A+Aj, -A-Aj, A+Aj, -A+Aj, -A+Aj, -A+Aj, A+Aj, A-Aj, -A-Aj, A+Aj, A+Aj, A+Aj, -A+Aj, A+Aj, A+Aj, A+Aj, A-Aj, -A+Aj, -A-Aj, A-Aj, -A+Aj, A-Aj |
| 4 | Polarization 1 | A-Aj, -A+Aj, A+Aj, -A+Aj, -A-Aj, -A-Aj. A-Aj, -A-Aj, A+Aj, -A+Aj, A+Aj, -A+Aj, A+Aj, A-Aj, -A+Aj, -A+Aj, -A-Aj, A-Aj, A+Aj, A-Aj, -A-Aj, -A+Aj, A+Aj, A+Aj, -A+Aj, A-Aj, -A+Aj, -A-Aj, A+Aj, A+Aj, - A+Aj, -A+Aj, A+Aj, A+Aj, A-Aj, -A-Aj, A-Aj, -A+Aj, -A-Aj, -A-Aj, -A+Aj, A-Aj, -A-Aj, -A-Aj, A-Aj, A+Aj, -A+Aj, A-Aj, A-Aj, A-Aj, -A-Aj, A-Aj, A-Aj, A-Aj, A+Aj, -A-Aj, -A+Aj, A+Aj, -A-Aj, A+Aj |
| | Polarization 2 | A+Aj, -A-Aj, A-Aj, -A-Aj, -A+Aj, -A+Aj. A+Aj, -A+Aj, A-Aj, -A-Aj, A-Aj, -A-Aj, A-Aj, A+Aj, -A-Aj, -A-Aj, -A+Aj, A+Aj, A-Aj, A+Aj, -A+Aj, -A-Aj, A-Aj, A-Aj, -A-Aj, A+Aj, -A-Aj, -A+Aj, A-Aj, A-Aj, -A-Aj, -A-Aj, A-Aj, A-Aj, A+Aj, -A+Aj, A+Aj, -A-Aj, -A+Aj, -A+Aj, -A-Aj, A+Aj, -A+Aj, -A+Aj, -A-Aj, A+Aj, A+Aj, A+Aj, -A+Aj, A+Aj, A+Aj, A+Aj, A-Aj, -A+Aj, -A-Aj, A-Aj, -A+Aj, A-Aj |
| 5 | Polarization 1 | -A-Aj, -A-Aj, -A+Aj, -A-Aj, -A+Aj, -A-Aj, -A+Aj, A+Aj, -A-Aj, A-Aj, A-Aj, A+Aj, A+Aj, -A-Aj, A+Aj, - A+Aj, A+Aj, A-Aj, A+Aj, -A+Aj, -A-Aj, A-Aj, -A-Aj, -A+Aj, A-Aj, A+Aj, -A+Aj, A-Aj, -A+Aj, A+Aj, -A-Aj, A+Aj, -A-Aj, -A+Aj, -A-Aj, -A-Aj, -A+Aj, A-Aj, -A+Aj, A-Aj, -A+Aj, -A-Aj, A-Aj, A+Aj, A+Aj, A-Aj, -A-Aj, A-Aj, A-Aj, A+Aj, -A-Aj, -A+Aj, A-Aj, A+Aj, A-Aj, A+Aj, -A-Aj, -A+Aj, -A+Aj, A-Aj, A+Aj |
| | Polarization 2 | A-Aj, A-Aj, A+Aj, A-Aj, -A+Aj, -A-Aj, A+Aj, -A+Aj, -A+Aj, -A+Aj, -A-Aj, -A-Aj, -A+Aj, -A+Aj, -A-Aj, A+Aj, A+Aj, -A+Aj, A+Aj, -A-Aj, A+Aj, A+Aj, -A-Aj, -A+Aj, A-Aj, -A-Aj, A+Aj, A-Aj, A-Aj, -A-Aj, -A-Aj, -A+Aj, A+Aj, -A-Aj, -A+Aj, A+Aj, A-Aj, -A+Aj, -A+Aj, A-Aj, A-Aj, A+Aj, A+Aj, A+Aj, A-Aj, -A-Aj, - A+Aj, A+Aj, A-Aj, A-Aj, -A-Aj, A+Aj, -A-Aj, A-Aj, A-Aj, -A-Aj, A-Aj, -A+Aj, -A+Aj, -A-Aj, A-Aj |

(continued)

| Index | Polarization | Pilot sequence |
|---|---|---|
| 6 | Polarization 1 | -A-Aj, -A-Aj, -A+Aj, -A-Aj, -A+Aj, -A-Aj, -A+Aj, A+Aj, -A-Aj, A-Aj, A-Aj, A+Aj, A+Aj, -A-Aj, A+Aj, - A+Aj, A+Aj, A-Aj, A+Aj, -A+Aj, -A-Aj, A-Aj, -A-Aj, -A+Aj, A-Aj, A+Aj, -A+Aj, A-Aj, -A+Aj, A+Aj, -A-Aj, A+Aj, -A-Aj, -A+Aj, -A-Aj, -A-Aj, -A+Aj, A-Aj, -A+Aj, A-Aj, -A+Aj, -A-Aj, A-Aj, A+Aj, A+Aj, A-Aj, -A-Aj, A-Aj, A-Aj, A+Aj, -A-Aj, -A+Aj, A-Aj, A+Aj, A-Aj, A+Aj, -A-Aj, -A+Aj, -A+Aj, A-Aj, A+Aj |
| | Polarization 2 | A+Aj, -A+Aj, -A+Aj, A+Aj, -A-Aj, A-Aj, -A+Aj, A-Aj, A-Aj, A-Aj, A-Aj, -A-Aj, -A-Aj, A-Aj, A-Aj, -A+Aj, A+Aj, A-Aj, A+Aj, A-Aj, -A+Aj, A+Aj, A-Aj, -A-Aj, A+Aj, -A-Aj, -A+Aj, A+Aj, -A+Aj, -A-Aj, -A-Aj, -A-Aj, A+Aj, A-Aj, -A-Aj, A+Aj, A+Aj, -A-Aj, A-Aj, A+Aj, -A+Aj, -A+Aj, A+Aj, A+Aj, A+Aj, -A-Aj, -A-Aj, A+Aj, A+Aj, -A+Aj, -A-Aj, -A+Aj, A-Aj, -A+Aj, -A+Aj, -A-Aj, -A+Aj, -A-Aj, A-Aj, A-Aj, -A+Aj |
| 7 | Polarization 1 | -A-Aj, -A-Aj, -A+Aj, -A-Aj, -A+Aj, -A-Aj, -A+Aj, A+Aj, -A-Aj, A-Aj, A-Aj, A+Aj, A+Aj, -A-Aj, A+Aj, - A+Aj, A+Aj, A-Aj, A+Aj, -A+Aj, -A-Aj, A-Aj, -A-Aj, -A+Aj, A-Aj, A+Aj, -A+Aj, A-Aj, -A+Aj, A+Aj, -A-Aj, A+Aj, -A-Aj, -A+Aj, -A-Aj, -A-Aj, -A+Aj, A-Aj, -A+Aj, A-Aj, -A+Aj, -A-Aj, A-Aj, A+Aj, A+Aj, A-Aj, -A-Aj, A-Aj, A-Aj, A+Aj, -A-Aj, -A+Aj, A-Aj, A+Aj, A-Aj, A+Aj, -A-Aj, -A+Aj, -A+Aj, A-Aj, A+Aj |
| | Polarization 2 | A+Aj, A-Aj, A-Aj, A+Aj, A-Aj, -A+Aj, -A-Aj, A+Aj, -A+Aj, -A+Aj, -A+Aj, -A-Aj, -A-Aj, -A+Aj, -A+Aj, -A-Aj, A+Aj, A+Aj, -A+Aj, A+Aj, -A-Aj, A+Aj, A+Aj, -A-Aj, -A+Aj, A-Aj, -A-Aj, A+Aj, A-Aj, A-Aj, -A-Aj, -A-Aj, -A+Aj, A+Aj, -A-Aj, -A+Aj, A+Aj, A-Aj, -A+Aj, -A+Aj, A-Aj, A-Aj, A+Aj, A+Aj, A+Aj, A-Aj, -A-Aj, - A+Aj, A+Aj, A-Aj, A-Aj, -A-Aj, A+Aj, -A-Aj, A-Aj, A-Aj, -A-Aj, A-Aj, -A+Aj, -A+Aj, -A-Aj |
| 8 | Polarization 1 | -A-Aj, -A+Aj, A-Aj, A+Aj, A-Aj, A+Aj, -A-Aj, -A+Aj, A-Aj, A-Aj, A-Aj, -A-Aj, A+Aj, A+Aj, -A-Aj, A-Aj, - A+Aj, -A-Aj, A+Aj, -A-Aj, A+Aj, -A-Aj, -A-Aj, -A+Aj, -A-Aj, -A+Aj, A-Aj, -A+Aj, A+Aj, -A-Aj, A+Aj, - A+Aj, A-Aj, A+Aj, -A-Aj, -A-Aj, A-Aj, -A+Aj, -A+Aj, A-Aj, A+Aj, A+Aj, -A+Aj, A-Aj, -A+Aj, A+Aj, A-Aj, A-Aj, A-Aj, -A+Aj, A+Aj, -A-Aj, -A+Aj, -A-Aj, -A+Aj, -A-Aj, -A-Aj, -A-Aj, A+Aj, A+Aj, -A+Aj |
| | Polarization 2 | -A+Aj, -A-Aj, A-Aj, A-Aj, -A+Aj, -A-Aj, -A+Aj, -A+Aj, -A-Aj, A+Aj, -A-Aj, -A+Aj, -A+Aj, A+Aj, A-Aj, - A-Aj, -A+Aj, A+Aj, A+Aj, A+Aj, -A+Aj, -A+Aj, A-Aj, A-Aj, -A+Aj, A+Aj, A-Aj, -A-Aj, A+Aj, A-Aj, -A-Aj, -A-Aj, -A+Aj, -A+Aj, A+Aj, -A-Aj, -A+Aj, A-Aj, -A-Aj, A+Aj, A+Aj, -A-Aj, A+Aj, A-Aj, A+Aj, A+Aj, -A-Aj, A-Aj, A-Aj, -A-Aj, -A-Aj, A-Aj, A-Aj. A-Aj, A+Aj, -A-Aj, A-Aj, -A+Aj, A+Aj, -A+Aj, -A+Aj |

**Table 23-2**

| Index | Polarization | Pilot sequence |
|---|---|---|
| 1 | Polarization 1 | -A-Aj, A+Aj, -A-Aj, A+Aj, A-Aj, A-Aj, -A-Aj, -A+Aj, -A-Aj, -A+Aj, A-Aj, A+Aj, A-Aj, A+Aj, A+Aj, -A-Aj, A-Aj, A-Aj, -A+Aj, -A+Aj, A+Aj, -A-Aj, -A-Aj, A+Aj, A+Aj, A-Aj, A+Aj, -A-Aj, A-Aj, -A+Aj, A+Aj, A-Aj, A-Aj, A+Aj, A+Aj, A+Aj, -A-Aj, -A+Aj, -A-Aj, A-Aj, -A-Aj, -A-Aj, A+Aj, -A-Aj, -A-Aj, -A-Aj, -A+Aj, - A+Aj, A-Aj, A+Aj, -A+Aj, -A+Aj, -A-Aj, -A+Aj, -A+Aj, -A+Aj, -A+Aj, A-Aj, -A-Aj, A+Aj, A-Aj |
| | Polarization 2 | A-Aj, -A+Aj, A-Aj, -A+Aj, -A-Aj, -A-Aj, A-Aj, A+Aj, A-Aj, A+Aj, -A-Aj, -A+Aj, -A-Aj, -A+Aj, -A+Aj, A-Aj, -A-Aj, -A-Aj, A+Aj, A+Aj, -A+Aj, A-Aj, A-Aj, -A+Aj, -A+Aj, -A-Aj, -A+Aj, A-Aj, -A-Aj, A+Aj, -A+Aj, -A-Aj, -A-Aj, -A+Aj, -A+Aj, -A+Aj, A-Aj, A+Aj, A-Aj, -A-Aj, A-Aj, A-Aj, -A+Aj, A-Aj, A-Aj, A-Aj, A+Aj, A+Aj, -A-Aj, -A+Aj, A+Aj, A+Aj, A-Aj, A+Aj, A+Aj, A+Aj, A+Aj, -A-Aj, A-Aj, -A+Aj, -A-Aj |

(continued)

| Index | Polarization | Pilot sequence |
|---|---|---|
| 2 | Polarization 1 | A+Aj, -A-Aj, A+Aj, -A-Aj, -A+Aj, -A+Aj, A+Aj, A-Aj, A+Aj, A-Aj, -A+Aj, -A-Aj, -A+Aj, -A-Aj, -A-Aj, A+Aj, -A+Aj, -A+Aj, A-Aj, A-Aj, -A-Aj, A+Aj, A+Aj, -A-Aj, -A-Aj, -A+Aj, -A-Aj, A+Aj, -A+Aj, A-Aj, -A-Aj, -A+Aj, -A+Aj, -A-Aj, -A-Aj, -A-Aj, A+Aj, A-Aj, A+Aj, -A+Aj, A+Aj, A+Aj, -A-Aj, A+Aj, A+Aj, A+Aj, A-Aj, A-Aj, -A+Aj, -A-Aj, A-Aj, A-Aj, A+Aj, A-Aj, A-Aj, A-Aj, A-Aj, -A+Aj, A+Aj, -A-Aj, -A+Aj |
| | Polarization 2 | -A+Aj, A-Aj, -A+Aj, A-Aj, A+Aj, A+Aj, -A+Aj, -A-Aj, -A+Aj, -A-Aj, A+Aj, A-Aj, A+Aj, A-Aj, A-Aj, - A+Aj, A+Aj, A+Aj, -A-Aj, -A-Aj, A-Aj, -A+Aj, -A+Aj, A-Aj, A-Aj, A+Aj, A-Aj, -A+Aj, A+Aj, -A-Aj, A-Aj, A+Aj, A+Aj, A-Aj, A-Aj, A-Aj, -A+Aj, -A-Aj, -A+Aj, A+Aj, -A+Aj, -A+Aj, A-Aj, -A+Aj, -A+Aj, -A+Aj, -A-Aj, -A-Aj, A+Aj, A-Aj, -A-Aj, -A-Aj, -A+Aj, -A-Aj, -A-Aj, -A-Aj, -A-Aj, A+Aj, -A+Aj, A-Aj, A+Aj |
| 3 | Polarization 1 | -A+Aj, -A+Aj, -A+Aj, A-Aj, A+Aj, A-Aj, A+Aj, A+Aj, -A+Aj, -A-Aj, A+Aj, A-Aj, A+Aj, -A-Aj, -A+Aj, -A-Aj, -A+Aj, -A-Aj, -A+Aj, A+Aj, A-Aj, -A-Aj, A+Aj, A+Aj, A-Aj, -A+Aj, A+Aj, -A-Aj, -A-Aj, -A-Aj, A+Aj, - A+Aj, A+Aj, -A+Aj, -A-Aj, -A+Aj, -A+Aj, -A-Aj, -A-Aj, -A-Aj, -A-Aj, -A+Aj, A+Aj, A+Aj, A-Aj, A+Aj, A-Aj, A+Aj, -A-Aj, A-Aj, A+Aj, A-Aj, -A+Aj, A-Aj, A-Aj, -A-Aj, -A+Aj, A-Aj, -A-Aj, A-Aj, A-Aj |
| | Polarization 2 | -A+Aj, A+Aj, -A+Aj, A+Aj, -A+Aj, -A+Aj, A-Aj, A-Aj, A-Aj, A+Aj, A-Aj, A+Aj, -A+Aj, -A+Aj, -A-Aj, -A-Aj, A-Aj, -A-Aj, -A+Aj, -A-Aj, A+Aj, -A+Aj, A-Aj, A+Aj, -A-Aj, -A-Aj, -A-Aj, -A+Aj, -A+Aj, A+Aj, A-Aj, -A-Aj, A-Aj, -A-Aj, -A+Aj, A+Aj, -A-Aj, A-Aj, A+Aj, -A-Aj, -A+Aj, A-Aj, -A+Aj, -A-Aj, A-Aj, A+Aj, - A+Aj, -A+Aj, A-Aj, -A-Aj, A-Aj, A+Aj, -A+Aj, A+Aj, A-Aj, -A-Aj, -A+Aj, A+Aj, A-Aj, A-Aj, A+Aj |
| 4 | Polarization 1 | A-Aj, -A+Aj, A-Aj, A+Aj, A+Aj, A-Aj, -A-Aj, A+Aj, -A-Aj, -A+Aj, A-Aj, A-Aj, A+Aj, -A+Aj, A-Aj, A-Aj, - A-Aj, -A-Aj, -A+Aj, A+Aj, -A-Aj, -A+Aj, -A-Aj, A+Aj, -A-Aj, -A+Aj, -A-Aj, A-Aj, A+Aj, A-Aj, A-Aj, - A+Aj, -A+Aj, -A+Aj, A-Aj, A+Aj, A-Aj, A+Aj, A+Aj, -A+Aj, -A-Aj, A+Aj, A-Aj, A+Aj, -A-Aj, -A+Aj, -A-Aj, -A+Aj, -A-Aj, -A+Aj, A+Aj, A-Aj, -A-Aj, A+Aj, A+Aj, A-Aj, -A+Aj, A+Aj, -A-Aj, -A-Aj |
| | Polarization 2 | A+Aj, -A+Aj, A+Aj, -A+Aj, -A+Aj, A-Aj, A-Aj, A-Aj, A+Aj, A-Aj, A+Aj, -A+Aj, -A+Aj, -A-Aj, -A-Aj, A-Aj, -A-Aj, -A+Aj, -A-Aj, A+Aj, -A+Aj, A-Aj, A+Aj, -A-Aj, -A-Aj, -A-Aj, -A+Aj, -A+Aj, A+Aj, A-Aj, -A-Aj, A-Aj, -A-Aj, -A+Aj, A+Aj, -A-Aj, A-Aj, A+Aj, -A-Aj, -A+Aj, A-Aj, -A+Aj, -A-Aj, A-Aj, A+Aj, -A+Aj, - A+Aj, A-Aj, -A-Aj, A-Aj, A+Aj, -A+Aj, A+Aj, A-Aj, -A-Aj, -A+Aj, A+Aj, A-Aj, A-Aj, A+Aj, A+Aj |
| 5 | Polarization 1 | A+Aj, -A-Aj, -A-Aj, -A-Aj, -A-Aj, -A+Aj, -A+Aj, A+Aj, -A+Aj, A+Aj, -A+Aj, A+Aj, A+Aj, -A-Aj, -A+Aj, A+Aj, A+Aj, -A-Aj, -A-Aj, A-Aj, -A-Aj, -A+Aj, A+Aj, A+Aj, A+Aj, A-Aj, A+Aj, A-Aj, -A-Aj, -A+Aj, A+Aj, A-Aj, A-Aj, -A+Aj, A-Aj, -A+Aj, -A+Aj, A-Aj, -A-Aj, A-Aj, A+Aj, A-Aj, -A+Aj, -A+Aj, -A+Aj, -A-Aj, -A-Aj, A+Aj, -A-Aj, -A+Aj, A-Aj, A+Aj, A-Aj, A-Aj, -A-Aj, A-Aj, A+Aj, A+Aj, -A-Aj, A-Aj, -A-Aj |
| | Polarization 2 | -A-Aj, -A-Aj, -A-Aj, A+Aj, -A-Aj, A-Aj, -A-Aj, A-Aj, -A-Aj, A+Aj, A-Aj, A-Aj, A-Aj, A+Aj, A-Aj, A-Aj, - A+Aj, A+Aj, -A-Aj, A-Aj, A+Aj, A+Aj, A+Aj, -A-Aj, -A+Aj, -A+Aj, -A-Aj, A-Aj, A+Aj, -A-Aj, A+Aj, A-Aj, -A+Aj, A+Aj, -A-Aj, -A+Aj, -A+Aj, A-Aj, -A+Aj, -A+Aj, A+Aj, -A+Aj, -A+Aj, A-Aj, -A+Aj, -A-Aj, A-Aj, A-Aj, -A-Aj, -A+Aj, -A-Aj, A+Aj, -A+Aj, A-Aj, -A+Aj, A-Aj, A+Aj, A+Aj, -A+Aj, -A-Aj, -A+Aj |

(17) When $N_{PS}$ = 67, the pilot sequence is one item in the following Table 24.

**109**

**Table 24**

| Index | Polarization | Pilot sequence |
|---|---|---|
| 1 | Polarization 1 | -A+Aj, A-Aj, A-Aj, -A-Aj, A-Aj, -A+Aj, A+Aj, A-Aj, -A-Aj, A-Aj, A-Aj, -A-Aj, -A+Aj, A-Aj, -A-Aj, -A-Aj, A-Aj, -A-Aj, -A-Aj, -A+Aj, A+Aj, A+Aj, A+Aj, -A+Aj, -A+Aj, -A+Aj, -A-Aj, A+Aj, - A-Aj, A+Aj, A-Aj, A+Aj, A-Aj, A-Aj, -A+Aj, -A+Aj, A-Aj, -A-Aj, A+Aj, -A+Aj, A+Aj, A-Aj, A+Aj, -A+Aj, -A+Aj, A-Aj, A+Aj, -A-Aj, A-Aj, -A+Aj, -A-Aj, -A+Aj, A+Aj, -A-Aj, -A-Aj, A-Aj, A+Aj, A+Aj, A-Aj, -A+Aj, -A+Aj, -A+Aj, A+Aj, -A-Aj, A+Aj, -A+Aj, -A-Aj |
| | Polarization 2 | A+Aj, -A-Aj, -A-Aj, A-Aj, -A-Aj, A+Aj, -A+Aj, -A-Aj, A-Aj, -A-Aj, -A-Aj, A-Aj, A+Aj, -A-Aj, A-Aj, A-Aj, -A-Aj, A-Aj, A-Aj, A+Aj, -A+Aj, -A+Aj, -A+Aj, A+Aj, A+Aj, A+Aj, A-Aj, -A+Aj, A-Aj, -A+Aj, -A-Aj, -A+Aj, -A-Aj, -A-Aj, A+Aj, A+Aj, -A-Aj, A-Aj, -A+Aj, A+Aj, -A+Aj, -A-Aj, - A+Aj, A+Aj, A+Aj, -A-Aj, -A+Aj, A-Aj, -A-Aj, A+Aj, A-Aj, A+Aj, -A+Aj, A-Aj, A-Aj, -A-Aj, - A+Aj, -A+Aj, -A-Aj, A+Aj, A+Aj, A+Aj, -A+Aj, A-Aj, -A+Aj, A+Aj, A-Aj |
| 2 | Polarization 1 | A-Aj, -A+Aj, -A+Aj, A+Aj, -A+Aj, A-Aj, -A-Aj, -A+Aj, A+Aj, -A+Aj, -A+Aj, A+Aj, A-Aj, -A+Aj, A+Aj, A+Aj, -A+Aj, A+Aj, A+Aj, A-Aj, -A-Aj, -A-Aj, -A-Aj, A-Aj, A-Aj, A-Aj, A+Aj, -A-Aj, A+Aj, -A-Aj, -A+Aj, -A-Aj, -A+Aj, -A+Aj, A-Aj, A-Aj, -A+Aj, A+Aj, -A-Aj, A-Aj, -A-Aj, -A+Aj, -A-Aj, A-Aj, A-Aj, -A+Aj, -A-Aj, A+Aj, -A+Aj, A-Aj, A+Aj, A-Aj, -A-Aj, A+Aj, A+Aj, -A+Aj, - A-Aj, -A-Aj, -A+Aj, A-Aj, A-Aj, A-Aj, -A-Aj, A+Aj, -A-Aj, A-Aj, A+Aj |
| | Polarization 2 | -A-Aj, A+Aj, A+Aj, -A+Aj, A+Aj, -A-Aj, A-Aj, A+Aj, -A+Aj, A+Aj, A+Aj, -A+Aj, -A-Aj, A+Aj, - A+Aj, -A+Aj, A+Aj, -A+Aj, -A+Aj, -A-Aj, A-Aj, A-Aj, A-Aj, -A-Aj, -A-Aj, -A-Aj, -A+Aj, A-Aj, - A+Aj, A-Aj, A+Aj, A-Aj, A+Aj, A+Aj, -A-Aj, -A-Aj, A+Aj, -A+Aj, A-Aj, -A-Aj, A-Aj, A+Aj, A-Aj, -A-Aj, -A-Aj, A+Aj, A-Aj, -A+Aj, A+Aj, -A-Aj, -A+Aj, -A-Aj, A-Aj, -A+Aj, -A+Aj, A+Aj, A-Aj, A- Aj, A+Aj, -A-Aj, -A-Aj, -A-Aj, A-Aj, -A+Aj, A-Aj, -A-Aj, -A+Aj |
| 3 | Polarization 1 | -A+Aj, A+Aj, -A+Aj, -A-Aj, A+Aj, -A-Aj, -A+Aj, -A+Aj, -A+Aj, A-Aj, -A-Aj, -A-Aj, A-Aj, A+Aj, A+Aj, -A-Aj, -A+Aj, A+Aj, -A+Aj, A-Aj, A+Aj, -A-Aj, A-Aj, -A+Aj, -A+Aj, -A-Aj, A-Aj, -A-Aj, - A+Aj, -A-Aj, A+Aj, A-Aj, -A+Aj, -A+Aj, A-Aj, A-Aj, -A-Aj, A-Aj, -A-Aj, A+Aj, -A-Aj, A+Aj, - A+Aj, -A+Aj, -A+Aj, -A-Aj, -A-Aj, -A-Aj, -A+Aj, A+Aj, A+Aj, A-Aj, A+Aj, A+Aj, A-Aj, -A+Aj, A+Aj, A-Aj, A-Aj, A+Aj, A-Aj, -A-Aj, -A+Aj, A-Aj, A+Aj, A-Aj, A-Aj |
| | Polarization 2 | -A-Aj, A-Aj, -A-Aj, -A+Aj, A-Aj, -A+Aj, -A-Aj, -A-Aj, -A-Aj, A+Aj, -A+Aj, -A+Aj, A+Aj, A-Aj, A- Aj, -A+Aj, -A-Aj, A-Aj, -A-Aj, A+Aj, A-Aj, -A+Aj, A+Aj, -A-Aj, -A-Aj, -A+Aj, A+Aj, -A+Aj, - A- Aj, -A+Aj, A-Aj, A+Aj, -A-Aj, -A-Aj, A+Aj, A+Aj, -A+Aj, A+Aj, -A+Aj, A-Aj, -A+Aj, A-Aj, - A-Aj, -A-Aj, -A-Aj, -A+Aj, -A+Aj, -A+Aj, -A-Aj, A-Aj, A-Aj, A+Aj, A-Aj, A-Aj, A+Aj, -A-Aj, -A-Aj, A+Aj, A+Aj, A-Aj, A+Aj, -A+Aj, -A-Aj, A+Aj, A-Aj, A+Aj, A+Aj |
| 4 | Polarization 1 | -A+Aj, A+Aj, -A+Aj, -A-Aj, A+Aj, -A-Aj, -A+Aj, -A+Aj, -A+Aj, A-Aj, -A-Aj, -A-Aj, A-Aj, A+Aj, A+Aj, -A-Aj, -A+Aj, A+Aj, -A+Aj, A-Aj, A+Aj, -A-Aj, A-Aj, -A+Aj, -A+Aj, -A-Aj, A-Aj, -A-Aj, - A+Aj, -A-Aj, A+Aj, A-Aj, -A+Aj, -A+Aj, A-Aj, A-Aj, -A-Aj, A-Aj, -A-Aj, A+Aj, -A-Aj, A+Aj, - A+Aj, -A+Aj, -A+Aj, -A-Aj, -A-Aj, -A-Aj, -A+Aj, A+Aj, A+Aj, A-Aj, A+Aj, A+Aj, A-Aj, -A+Aj, A+Aj, A-Aj, A-Aj, A+Aj, A-Aj, -A-Aj, -A+Aj, A-Aj, A+Aj, A-Aj, A-Aj |
| | Polarization 2 | A+Aj, -A+Aj, A+Aj, A-Aj, -A+Aj, A-Aj, A+Aj, A+Aj, A+Aj, -A-Aj, A-Aj, A-Aj, -A-Aj, -A+Aj, - A+Aj, A-Aj, A+Aj, -A+Aj, A+Aj, -A-Aj, -A+Aj, A-Aj, -A-Aj, A+Aj, A+Aj, A-Aj, -A-Aj, A-Aj, A+Aj, A-Aj, -A+Aj, -A-Aj, A+Aj, A+Aj, -A-Aj, -A-Aj, A-Aj, -A-Aj, A-Aj, -A+Aj, A-Aj, -A+Aj, A+Aj, A+Aj, A+Aj, A-Aj, A-Aj, A-Aj, A+Aj, -A+Aj, -A+Aj, -A-Aj, -A+Aj, -A+Aj, -A-Aj, A+Aj, - A+Aj, -A-Aj, -A-Aj, -A+Aj, -A-Aj, A-Aj, A+Aj, -A-Aj, -A+Aj, -A-Aj, -A-Aj |
| 5 | Polarization 1 | A-Aj, -A-Aj, A-Aj, A+Aj, -A-Aj, A+Aj, A-Aj, A-Aj, A-Aj, -A+Aj, A+Aj, A+Aj, -A+Aj, -A-Aj, -A-Aj, A+Aj, A-Aj, -A-Aj, A-Aj, -A+Aj, -A-Aj, A+Aj, -A+Aj, A-Aj, A-Aj, A+Aj, -A+Aj, A+Aj, A-Aj, A+Aj, -A-Aj, -A+Aj, A-Aj, A-Aj, -A+Aj, -A+Aj, A+Aj, -A+Aj, A+Aj, -A-Aj, A+Aj, -A-Aj, A-Aj, A-Aj, A- Aj, A+Aj, A+Aj, A+Aj, A-Aj, -A-Aj, -A-Aj, -A+Aj, -A-Aj, -A-Aj, -A+Aj, A-Aj, -A-Aj, - A+Aj, -A+Aj, -A-Aj, -A+Aj, A+Aj, A-Aj, -A+Aj, -A-Aj, -A+Aj, -A+Aj |
| | Polarization 2 | -A-Aj, A-Aj, -A-Aj, -A+Aj, A-Aj, -A+Aj, -A-Aj, -A-Aj, -A-Aj, A+Aj, -A+Aj, -A+Aj, A+Aj, A-Aj, A- Aj, -A+Aj, -A-Aj, A-Aj, -A-Aj, A+Aj, A-Aj, -A+Aj, A+Aj, -A-Aj, -A-Aj, -A+Aj, A+Aj, -A+Aj, - A- Aj, -A+Aj, A-Aj, A+Aj, -A-Aj, -A-Aj, A+Aj, A+Aj, -A+Aj, A+Aj, -A+Aj, A-Aj, -A+Aj, A-Aj, - A-Aj, -A-Aj, -A-Aj, -A+Aj, -A+Aj, -A+Aj, -A-Aj, A-Aj, A-Aj, A+Aj, A-Aj, A-Aj, A+Aj, -A-Aj, A-Aj, A+Aj, A+Aj, A-Aj, A+Aj, -A+Aj, -A-Aj, A+Aj, A-Aj, A+Aj, A+Aj |

(continued)

| Index | Polarization | Pilot sequence |
|---|---|---|
| 6 | Polarization 1 | A-Aj, -A-Aj, A-Aj, A+Aj, -A-Aj, A+Aj, A-Aj, A-Aj, A-Aj, -A+Aj, A+Aj, A+Aj, -A+Aj, -A-Aj, -A-Aj, A+Aj, A-Aj, -A-Aj, A-Aj, -A+Aj, -A-Aj, A+Aj, -A+Aj, A-Aj, A-Aj, A+Aj, -A+Aj, A+Aj, A-Aj, A+Aj, -A-Aj, -A+Aj, A-Aj, A-Aj, -A+Aj, -A+Aj, A+Aj, -A+Aj, A+Aj, -A-Aj, A+Aj, -A-Aj, A-Aj, A-Aj, A-Aj, A+Aj, A+Aj, A+Aj, A-Aj, -A-Aj, -A-Aj, -A+Aj, -A-Aj, -A-Aj, -A+Aj, A-Aj, -A-Aj, - A+Aj, -A+Aj, -A-Aj, -A+Aj, A+Aj, A-Aj, -A+Aj, -A-Aj, -A+Aj, -A+Aj |
| | Polarization 2 | A+Aj, -A+Aj, A+Aj, A-Aj, -A+Aj, A-Aj, A+Aj, A+Aj, A+Aj, -A-Aj, A-Aj, A-Aj, -A-Aj, -A+Aj, -A+Aj, A-Aj, A+Aj, -A+Aj, A+Aj, -A-Aj, -A+Aj, A-Aj, -A-Aj, A+Aj, A+Aj, A-Aj, -A-Aj, A-Aj, A+Aj, A-Aj, -A+Aj, -A-Aj, A+Aj, A+Aj, -A-Aj, -A-Aj, A-Aj, -A-Aj, A-Aj, -A+Aj, A-Aj, -A+Aj, A+Aj, A+Aj, A+Aj, A-Aj, A-Aj, A-Aj, A+Aj, -A+Aj, -A+Aj, -A-Aj, -A+Aj, -A+Aj, -A-Aj, A+Aj, - A+Aj, -A-Aj, -A-Aj, -A+Aj, -A-Aj, A-Aj, A+Aj, -A-Aj, -A+Aj, -A-Aj, -A-Aj |
| 7 | Polarization 1 | A+Aj, A-Aj, -A+Aj, A-Aj, -A-Aj, A-Aj, -A-Aj, -A-Aj, A+Aj, -A-Aj, A+Aj, -A-Aj, A-Aj, -A+Aj, - A+Aj, A+Aj, A+Aj, -A-Aj, -A+Aj, -A+Aj, -A+Aj, A-Aj, -A-Aj, A+Aj, -A+Aj, A+Aj, -A+Aj, A-Aj, -A-Aj, A-Aj, A+Aj, -A+Aj, A-Aj, A-Aj, A-Aj, -A+Aj, -A+Aj, -A+Aj, -A-Aj, A+Aj, -A-Aj, -A-Aj, A-Aj, A-Aj, A-Aj, A-Aj, A+Aj, -A+Aj, A+Aj, -A-Aj, -A-Aj, A-Aj, -A+Aj, A+Aj, A+Aj, -A+Aj, -A-Aj, A-Aj, A+Aj, -A-Aj, A+Aj, -A+Aj, -A-Aj, A+Aj, A-Aj, A+Aj, -A+Aj |
| | Polarization 2 | -A+Aj, A+Aj, A-Aj, A-Aj, A+Aj, A-Aj, -A+Aj, -A-Aj, A+Aj, -A+Aj, -A+Aj, -A+Aj, -A-Aj, -A-Aj, - A+Aj, -A+Aj, -A-Aj, A+Aj, A+Aj, -A+Aj, A+Aj, -A-Aj, A+Aj, A+Aj, -A-Aj, -A+Aj, A-Aj, -A-Aj, A+Aj, A-Aj, A-Aj, -A-Aj, -A-Aj, -A+Aj, A+Aj, -A-Aj, -A+Aj, A+Aj, A-Aj, -A+Aj, -A+Aj, A-Aj, A-Aj, A+Aj, A+Aj, A+Aj, A-Aj, -A-Aj, -A+Aj, A+Aj, A-Aj, A-Aj, -A-Aj, A+Aj, -A-Aj, A-Aj, A-Aj, -A-Aj, A-Aj, -A+Aj, -A+Aj, -A-Aj. A-Aj, -A+Aj, A+Aj, -A-Aj, -A-Aj |

(18) When $N_{PS}$ = 72, if a remainder of $N_{TS}$ divided by 4 is 1, the pilot sequence is one item in the following Table 25-1. If a remainder of $N_{TS}$ divided by 4 is 3, the pilot sequence is one item in the following Table 25-1 or Table 25-2. Alternatively, any item is selected from the following Table 25-3 as a pilot sequence in one polarization direction, and any item is selected from the following Table 25-4 as a pilot sequence in the other polarization direction. Alternatively, any item is selected from the following Table 25-5 as a pilot sequence in one polarization direction, and any item is selected from the following Table 25-6 as a pilot sequence in the other polarization direction.

**Table 25-1**

| Index | Polarization | Pilot sequence |
|---|---|---|
| 1 | Polarization 1 | -A-Aj, -A-Aj, A-Aj, -A-Aj, A+Aj, -A-Aj, -A+Aj, -A+Aj, A-Aj, A-Aj, -A+Aj, A+Aj, A-Aj, -A-Aj, A-Aj, - A+Aj, -A+Aj, -A-Aj, -A-Aj, -A+Aj, -A-Aj, A+Aj, A-Aj, -A-Aj, -A+Aj, -A+Aj, -A+Aj, A-Aj, -A+Aj, - A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj, -A+Aj, A-Aj, -A-Aj, -A-Aj, A+Aj, -A+Aj, A+Aj, -A+Aj, A+Aj, A-Aj, A+Aj, A-Aj, -A+Aj, A+Aj, -A+Aj, -A-Aj |
| | Polarization 2 | -A+Aj, -A-Aj, -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj, -A-Aj, A-Aj, A+Aj, A-Aj, A+Aj, -A-Aj, A-Aj |

(continued)

| Index | Polarization | Pilot sequence |
|---|---|---|
| 2 | Polarization 1 | -A-Aj, -A-Aj, A-Aj, -A-Aj, A+Aj, -A-Aj, -A+Aj, -A+Aj, A-Aj, A-Aj, -A+Aj, A+Aj, A-Aj, -A-Aj, A-Aj, - A+Aj, -A+Aj, -A-Aj, -A-Aj, -A+Aj, -A-Aj, A+Aj, A-Aj, -A-Aj, -A+Aj, -A+Aj, -A+Aj, A-Aj, -A+Aj, - A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj, -A+Aj, A-Aj, -A-Aj, -A-Aj, A+Aj, -A+Aj, A+Aj, -A+Aj, A+Aj, A-Aj, A+Aj, A-Aj, -A+Aj, A+Aj, -A+Aj, -A-Aj |
| | Polarization 2 | A-Aj, A+Aj, A-Aj, A-Aj, -A-Aj, A-Aj, -A+Aj, A-Aj, A+Aj, A+Aj, -A-Aj, -A-Aj, A+Aj, -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, - A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj, A+Aj, -A+Aj, -A-Aj, -A+Aj, -A-Aj, A+Aj, -A+Aj |
| 3 | Polarization 1 | -A-Aj, -A+Aj, -A-Aj, -A-Aj, A-Aj, -A-Aj, A+Aj, -A-Aj, -A+Aj, -A+Aj, A-Aj, A-Aj, -A+Aj, A+Aj, A-Aj, - A-Aj, A-Aj, -A+Aj, -A+Aj, -A-Aj, -A-Aj, -A+Aj, -A-Aj, A+Aj, A-Aj, -A-Aj, -A+Aj, -A+Aj, -A+Aj, A-Aj, -A+Aj, -A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A- Aj, A-Aj, -A+Aj, A-Aj, -A-Aj, -A-Aj, A+Aj, -A+Aj, A+Aj, -A+Aj, A+Aj, A-Aj, A+Aj, A-Aj, -A+Aj, A+Aj |
| | Polarization 2 | -A+Aj, -A-Aj, -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj, -A-Aj, A-Aj, A+Aj, A-Aj, A+Aj, -A-Aj, A-Aj |
| 4 | Polarization 1 | -A-Aj, -A+Aj, -A-Aj, -A-Aj, A-Aj, -A-Aj, A+Aj, -A-Aj, -A+Aj, -A+Aj, A-Aj, A-Aj, -A+Aj, A+Aj, A-Aj, - A-Aj, A-Aj, -A+Aj, -A+Aj, -A-Aj, -A-Aj, -A+Aj, -A-Aj, A+Aj, A-Aj, -A-Aj, -A+Aj, -A+Aj, -A+Aj, A-Aj, -A+Aj, -A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A- Aj, A-Aj, -A+Aj, A-Aj, -A-Aj, -A-Aj, A+Aj, -A+Aj, A+Aj, -A+Aj, A+Aj, A-Aj, A+Aj, A-Aj, -A+Aj, A+Aj |
| | Polarization 2 | -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj, -A-Aj, A-Aj, A+Aj, A-Aj, A+Aj, -A-Aj, A-Aj, -A-Aj, -A+Aj |
| 5 | Polarization 1 | -A-Aj, -A+Aj, -A-Aj, -A-Aj, A-Aj, -A-Aj, A+Aj, -A-Aj, -A+Aj, -A+Aj, A-Aj, A-Aj, -A+Aj, A+Aj, A-Aj, - A-Aj, A-Aj, -A+Aj, -A+Aj, -A-Aj, -A-Aj, -A+Aj, -A-Aj, A+Aj, A-Aj, -A-Aj, -A+Aj, -A+Aj, -A+Aj, A-Aj, -A+Aj, -A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A- Aj, A-Aj, -A+Aj, A-Aj, -A-Aj, -A-Aj, A+Aj, -A+Aj, A+Aj, -A+Aj, A+Aj, A-Aj, A+Aj, A-Aj, -A+Aj, A+Aj |
| | Polarization 2 | A-Aj, A-Aj, -A-Aj, A-Aj, -A+Aj, A-Aj, A+Aj, A+Aj, -A-Aj, -A-Aj, A+Aj, -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, - A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, - A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj, A+Aj, -A+Aj, -A-Aj, -A+Aj, -A-Aj, A+Aj, -A+Aj, A+Aj, A-Aj |

(continued)

| Index | Polarization | Pilot sequence |
|---|---|---|
| 6 | Polarization 1 | -A-Aj, -A+Aj, -A-Aj, -A-Aj, A-Aj, -A-Aj, A+Aj, -A-Aj, -A+Aj, -A+Aj, A-Aj, A-Aj, -A+Aj, A+Aj, A-Aj, - A-Aj, A-Aj, -A+Aj, -A+Aj, -A-Aj, -A-Aj, -A+Aj, -A-Aj, A+Aj, A-Aj, -A-Aj, -A+Aj, -A+Aj, -A+Aj, A-Aj, -A+Aj, -A+Aj, A+Aj, -A-Aj, -A+Aj, A-Aj, A-Aj, A-Aj, A+Aj, A-Aj, A-Aj, A+Aj, -A+Aj, A-Aj, A+Aj, A+Aj, A+Aj, A+Aj, -A-Aj, -A-Aj, -A-Aj, A-Aj, A+Aj, A+Aj, -A-Aj, A+Aj, -A-Aj, A-Aj, -A+Aj, A-Aj, -A-Aj, -A-Aj, A+Aj, -A+Aj, A+Aj, -A+Aj, A+Aj, A-Aj, A+Aj, A-Aj, -A+Aj, A+Aj |
| | Polarization 2 | A-Aj, A+Aj, A-Aj, A-Aj, -A-Aj, A-Aj, -A+Aj, A-Aj, A+Aj, A+Aj, -A-Aj, -A-Aj, A+Aj, -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, - A+Aj, -A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj, A+Aj, -A+Aj, -A-Aj, -A+Aj, -A-Aj, A+Aj, -A+Aj |
| 7 | Polarization 1 | -A+Aj, -A-Aj, -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj, -A-Aj, A-Aj, A+Aj, A-Aj, A+Aj, -A-Aj, A-Aj |
| | Polarization 2 | A+Aj, A-Aj, A+Aj, A+Aj, -A+Aj, A+Aj, -A-Aj, A+Aj, A-Aj, A-Aj, -A+Aj, -A+Aj, A-Aj, -A-Aj, -A+Aj, A+Aj, -A+Aj, A-Aj, A-Aj, A+Aj, A+Aj. A-Aj, A+Aj, -A-Aj, -A+Aj, A+Aj, A-Aj, A-Aj, A-Aj, -A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, -A-Aj, A-Aj, -A-Aj, A-Aj, -A-Aj, -A+Aj, -A-Aj, -A+Aj, A-Aj, -A-Aj |
| 8 | Polarization 1 | -A+Aj, -A-Aj, -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj, -A-Aj, A-Aj, A+Aj, A-Aj, A+Aj, -A-Aj, A-Aj |
| | Polarization 2 | A+Aj, A+Aj, -A+Aj, A+Aj, -A-Aj, A+Aj, A-Aj, A-Aj, -A+Aj, -A+Aj, A-Aj, -A-Aj, -A+Aj, A+Aj, -A+Aj, A-Aj, A-Aj, A+Aj, A+Aj, A-Aj, A+Aj, -A-Aj, -A+Aj, A+Aj, A-Aj, A-Aj, A-Aj, -A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, -A-Aj, A-Aj, -A-Aj, A-Aj, -A-Aj, -A+Aj, -A-Aj, -A+Aj, A-Aj, -A-Aj, A-Aj, A+Aj |
| 9 | Polarization 1 | -A+Aj, -A+Aj, A+Aj, -A+Aj, A-Aj, -A+Aj, -A-Aj, -A-Aj, A+Aj, A+Aj, -A-Aj, A-Aj, A+Aj, -A+Aj, A+Aj, -A-Aj, -A-Aj, -A+Aj, -A+Aj, -A-Aj, -A+Aj, A-Aj, A+Aj, -A+Aj, -A-Aj, -A-Aj, -A-Aj, A+Aj, -A-Aj, -A-Aj, A-Aj, -A+Aj, -A-Aj, A+Aj, A+Aj, A+Aj, A-Aj, A+Aj, A+Aj, A-Aj, -A-Aj, A+Aj, A-Aj, A-Aj, A-Aj, A-Aj, -A+Aj, -A+Aj, -A+Aj, A+Aj, A-Aj, A-Aj, -A+Aj, A-Aj, -A+Aj, A+Aj, -A-Aj, A+Aj, -A+Aj, -A+Aj, A-Aj, -A-Aj, A-Aj, -A-Aj, A-Aj, A+Aj, A-Aj, A+Aj, -A-Aj, A-Aj, -A-Aj, -A+Aj |
| | Polarization 2 | A+Aj, A-Aj, A+Aj, A+Aj, -A+Aj, A+Aj, -A-Aj, A+Aj, A-Aj, A-Aj, -A+Aj, -A+Aj, A-Aj, -A-Aj, -A+Aj, A+Aj, -A+Aj, A-Aj, A-Aj, A+Aj, A+Aj. A-Aj, A+Aj, -A-Aj, -A+Aj, A+Aj, A-Aj, A-Aj, A-Aj, -A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, -A-Aj, A-Aj, -A-Aj, A-Aj, -A-Aj, -A+Aj, -A-Aj, -A+Aj, A-Aj, -A-Aj |

(continued)

| Index | Polarization | Pilot sequence |
|---|---|---|
| 10 | Polarization 1 | A-Aj, A-Aj, -A-Aj, A-Aj, -A+Aj, A-Aj, A+Aj, A+Aj, -A-Aj, -A-Aj, A+Aj, -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, -A+Aj, -A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj, A+Aj, -A+Aj, -A-Aj, -A+Aj, -A-Aj, A+Aj, -A+Aj, A+Aj, A-Aj |
| | Polarization 2 | A+Aj, A-Aj, A+Aj, A+Aj, -A+Aj, A+Aj, -A-Aj, A+Aj, A-Aj, A-Aj, -A+Aj, -A+Aj, A-Aj, -A-Aj, -A+Aj, A+Aj, -A+Aj, A-Aj, A-Aj, A+Aj, A+Aj. A-Aj, A+Aj, -A-Aj, -A+Aj, A+Aj, A-Aj, A-Aj, A-Aj, -A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, -A-Aj, A-Aj, -A-Aj, A-Aj, -A-Aj, -A+Aj, -A-Aj, -A+Aj, A-Aj, -A-Aj |
| 11 | Polarization 1 | A-Aj, A+Aj, A-Aj, A-Aj, -A-Aj, A-Aj, -A+Aj, A-Aj, A+Aj, A+Aj, -A-Aj, -A-Aj, A+Aj, -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, - A+Aj, -A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj, A+Aj, -A+Aj, -A-Aj, -A+Aj, -A-Aj, A+Aj, -A+Aj |
| | Polarization 2 | A+Aj, A-Aj, A+Aj, A+Aj, -A+Aj, A+Aj, -A-Aj, A+Aj, A-Aj, A-Aj, -A+Aj, -A+Aj, A-Aj, -A-Aj, -A+Aj, A+Aj, -A+Aj, A-Aj, A-Aj, A+Aj, A+Aj. A-Aj, A+Aj, -A-Aj, -A+Aj, A+Aj, A-Aj, A-Aj, A-Aj, -A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, -A-Aj, A-Aj, -A-Aj, A-Aj, -A-Aj, -A+Aj, -A-Aj, -A+Aj, A-Aj, -A-Aj |
| 12 | Polarization 1 | A-Aj, A+Aj, A-Aj, A-Aj, -A-Aj, A-Aj, -A+Aj, A-Aj, A+Aj, A+Aj, -A-Aj, -A-Aj, A+Aj, -A+Aj, -A-Aj, A-Aj, -A-Aj, A+Aj, A+Aj, A-Aj, A-Aj, A+Aj, A-Aj, -A+Aj, -A-Aj, A-Aj, A+Aj, A+Aj, A+Aj, -A-Aj, A+Aj, A+Aj, -A+Aj, A-Aj, A+Aj, -A-Aj, -A-Aj, -A-Aj, -A+Aj, -A-Aj, -A-Aj, -A+Aj, A+Aj, -A-Aj, -A+Aj, - A+Aj, -A+Aj, -A+Aj, A-Aj, A-Aj, A-Aj, -A-Aj, -A+Aj, -A+Aj, A-Aj, -A+Aj, A-Aj, -A-Aj, A+Aj, -A-Aj, A-Aj, A-Aj, -A+Aj, A+Aj, -A+Aj, A+Aj, -A+Aj, -A-Aj, -A+Aj, -A-Aj, A+Aj, -A+Aj |
| | Polarization 2 | A+Aj, A+Aj, -A+Aj, A+Aj, -A-Aj, A+Aj, A-Aj, A-Aj, -A+Aj, -A+Aj, A-Aj, -A-Aj, -A+Aj, A+Aj, -A+Aj, A-Aj, A-Aj, A+Aj, A+Aj, A-Aj, A+Aj, -A-Aj, -A+Aj, A+Aj, A-Aj, A-Aj, A-Aj, -A+Aj, A-Aj, A-Aj, -A-Aj, A+Aj, A-Aj, -A+Aj, -A+Aj, -A+Aj, -A-Aj, -A+Aj, -A+Aj, -A-Aj, A-Aj, -A+Aj, -A-Aj, -A-Aj, -A-Aj, -A-Aj, A+Aj, A+Aj, A+Aj, -A+Aj, -A-Aj, -A-Aj, A+Aj, -A-Aj, A+Aj, -A+Aj, A-Aj, -A+Aj, A+Aj, A+Aj, -A-Aj, A-Aj, -A-Aj, A-Aj, -A-Aj, -A+Aj, -A-Aj, -A+Aj, A-Aj, -A-Aj, A-Aj, A+Aj |
| 13 | Polarization 1 | -A-Aj, -A+Aj, A-Aj, -A-Aj, A-Aj, -A-Aj, -A+Aj, -A-Aj, -A+Aj, -A-Aj, A+Aj, A+Aj, A-Aj, -A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, - A-Aj, A-Aj, A-Aj, -A-Aj, A-Aj, A-Aj, A-Aj, -A+Aj, A+Aj, -A-Aj, -A+Aj, -A+Aj, A-Aj, -A+Aj, -A+Aj, - A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj |
| | Polarization 2 | -A+Aj, -A-Aj, A+Aj, -A+Aj, A+Aj, -A+Aj, -A-Aj, -A+Aj, -A-Aj, -A+Aj, A-Aj, A-Aj, A+Aj, -A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, - A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, - A-Aj, A-Aj, A+Aj, -A+Aj, A-Aj, -A-Aj, A-Aj, A-Aj, -A-Aj, -A-Aj, A+Aj, A-Aj, A+Aj, -A+Aj, -A-Aj, A+Aj, A+Aj, -A-Aj, -A-Aj, A-Aj, -A+Aj, A-Aj, A+Aj, A-Aj, A-Aj, -A-Aj, A-Aj |

(continued)

| Index | Polarization | Pilot sequence |
|---|---|---|
| 14 | Polarization 1 | -A-Aj, -A+Aj, A-Aj, -A-Aj, A-Aj, -A-Aj, -A+Aj, -A-Aj, -A+Aj, -A-Aj, A+Aj, A+Aj, A-Aj, -A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, - A-Aj, A-Aj, A-Aj, -A-Aj, A-Aj, A-Aj, A-Aj, -A+Aj, A+Aj, -A-Aj, -A+Aj, -A+Aj, A-Aj, -A+Aj, -A+Aj, - A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj |
| | Polarization 2 | -A+Aj, A+Aj, A-Aj, A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, -A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, -A+Aj, A+Aj, -A+Aj, -A+Aj, A+Aj, A+Aj, -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj |
| 15 | Polarization 1 | -A-Aj, -A+Aj, A-Aj, -A-Aj, A-Aj, -A-Aj, -A+Aj, -A-Aj, -A+Aj, -A-Aj, A+Aj, A+Aj, A-Aj, -A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, - A-Aj, A-Aj, A-Aj, -A-Aj, A-Aj, A-Aj, A-Aj, -A+Aj, A+Aj, -A-Aj, -A+Aj, -A+Aj, A-Aj, -A+Aj, -A+Aj, - A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj |
| | Polarization 2 | A-Aj, -A-Aj, -A+Aj, -A-Aj, A+Aj, -A+Aj, A+Aj, -A+Aj, -A-Aj, -A+Aj, -A-Aj, -A+Aj, A-Aj, A-Aj, A+Aj, - A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, - A-Aj, -A-Aj, -A-Aj, A-Aj, A+Aj, -A+Aj, A-Aj, -A-Aj, A-Aj, A-Aj, -A-Aj, -A-Aj, A+Aj, A-Aj, A+Aj, - A+Aj, -A-Aj, A+Aj, A+Aj, -A-Aj, -A-Aj, A-Aj, -A+Aj, A-Aj, A+Aj, A-Aj, A-Aj |
| 16 | Polarization 1 | -A-Aj, -A+Aj, A-Aj, -A-Aj, A-Aj, -A-Aj, -A+Aj, -A-Aj, -A+Aj, -A-Aj, A+Aj, A+Aj, A-Aj, -A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, - A-Aj, A-Aj, A-Aj, -A-Aj, A-Aj, A-Aj, A-Aj, -A+Aj, A+Aj, -A-Aj, -A+Aj, -A+Aj, A-Aj, -A+Aj, -A+Aj, - A+Aj, A+Aj, A-Aj, -A-Aj, A+Aj, -A+Aj, A+Aj, A+Aj, -A+Aj, -A+Aj, A-Aj, A+Aj, A-Aj, -A-Aj, -A+Aj, A-Aj, A-Aj, -A+Aj, -A+Aj, A+Aj, -A-Aj, A+Aj, A-Aj, A+Aj, A+Aj, -A+Aj, A+Aj |
| | Polarization 2 | A-Aj, A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, - A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, -A+Aj, A+Aj, -A+Aj, -A+Aj, A+Aj, A+Aj, -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj, A+Aj, -A+Aj |
| 17 | Polarization 1 | -A-Aj, A-Aj, A+Aj, A-Aj, -A+Aj, A+Aj, -A+Aj, A+Aj, A-Aj, A+Aj, A-Aj, A+Aj, -A-Aj, -A-Aj, -A+Aj, A-Aj, -A+Aj, -A-Aj, A+Aj, -A-Aj, A+Aj, A+Aj, -A+Aj, -A-Aj, -A-Aj, -A-Aj, A+Aj, A+Aj, A+Aj, A+Aj, - A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, -A+Aj, -A+Aj, A-Aj, A-Aj, -A-Aj, A+Aj, -A-Aj, -A+Aj, -A-Aj, -A-Aj |
| | Polarization 2 | -A+Aj, -A-Aj, A+Aj, -A+Aj, A+Aj, -A+Aj, -A-Aj, -A+Aj, -A-Aj, -A+Aj, A-Aj, A-Aj, A+Aj, -A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, - A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, - A-Aj, A-Aj, A+Aj, -A+Aj, A-Aj, -A-Aj, A-Aj, A-Aj, -A-Aj, -A-Aj, A+Aj, A-Aj, A+Aj, -A+Aj, -A-Aj, A+Aj, A+Aj, -A-Aj, -A-Aj, A-Aj, -A+Aj, A-Aj, A+Aj, A-Aj, A-Aj, -A-Aj, A-Aj |

(continued)

| Index | Polarization | Pilot sequence |
|---|---|---|
| 18 | Polarization 1 | -A-Aj, A-Aj, A+Aj, A-Aj, -A+Aj, A+Aj, -A+Aj, A+Aj, A-Aj, A+Aj, A-Aj, A+Aj, -A-Aj, -A-Aj, -A+Aj, A-Aj, -A+Aj, -A-Aj, A+Aj, -A-Aj, A+Aj, A+Aj, -A+Aj, -A-Aj, -A-Aj, -A-Aj, A+Aj, A+Aj, A+Aj, A+Aj, - A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, -A+Aj, -A+Aj, A-Aj, A-Aj, -A-Aj, A+Aj, -A-Aj, -A+Aj, -A-Aj, -A-Aj |
| | Polarization 2 | A-Aj, A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, - A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, -A+Aj, A+Aj, -A+Aj, -A+Aj, A+Aj, A+Aj, -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj, A+Aj, -A+Aj |
| 19 | Polarization 1 | -A+Aj, -A-Aj, A+Aj, -A+Aj, A+Aj, -A+Aj, -A-Aj, -A+Aj, -A-Aj, -A+Aj, A-Aj, A-Aj, A+Aj, -A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, - A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, - A-Aj, A-Aj, A+Aj, -A+Aj, A-Aj, -A-Aj, A-Aj, A-Aj, -A-Aj, -A-Aj, A+Aj, A-Aj, A+Aj, -A+Aj, -A-Aj, A+Aj, A+Aj, -A-Aj, -A-Aj, A-Aj, -A+Aj, A-Aj, A+Aj, A-Aj, A-Aj, -A-Aj, A-Aj |
| | Polarization 2 | A+Aj, -A+Aj, -A-Aj, -A+Aj, A-Aj, -A-Aj, A-Aj, -A-Aj, -A+Aj, -A-Aj, -A+Aj, -A-Aj, A+Aj, A+Aj, A-Aj, - A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, -A-Aj, A-Aj, A-Aj, -A-Aj, A-Aj, A-Aj, A-Aj, -A+Aj, A+Aj, -A-Aj, -A+Aj, -A+Aj, A-Aj, - A+Aj, -A+Aj, -A+Aj, A+Aj, A-Aj, -A-Aj, A+Aj, -A+Aj, A+Aj, A+Aj, -A+Aj, -A+Aj, A-Aj, A+Aj, A-Aj, - A-Aj, -A+Aj, A-Aj, A-Aj, -A+Aj, A+Aj, -A-Aj, A+Aj, A-Aj, A+Aj, A+Aj |
| 20 | Polarization 1 | -A+Aj, -A-Aj, A+Aj, -A+Aj, A+Aj, -A+Aj, -A-Aj, -A+Aj, -A-Aj, -A+Aj, A-Aj, A-Aj, A+Aj, -A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, - A+Aj, A+Aj, A+Aj, -A+Aj, A+Aj, A+Aj, A+Aj, -A-Aj, A-Aj, -A+Aj, -A-Aj, -A-Aj, A+Aj, -A-Aj, -A-Aj, - A-Aj, A-Aj, A+Aj, -A+Aj, A-Aj, -A-Aj, A-Aj, A-Aj, -A-Aj, -A-Aj, A-Aj, A-Aj, -A+Aj, A-Aj, A+Aj, -A-Aj, A+Aj, -A+Aj, -A-Aj, A+Aj, A+Aj, -A-Aj, -A-Aj, A-Aj, -A+Aj, A-Aj, A+Aj, A-Aj, A-Aj, -A-Aj, A-Aj |
| | Polarization 2 | A+Aj, A-Aj, -A+Aj, A+Aj, -A+Aj, A+Aj, A-Aj, A+Aj, A-Aj, A+Aj, -A-Aj, -A-Aj, -A+Aj, A-Aj, -A+Aj, - A-Aj, A+Aj, -A-Aj, A+Aj, A+Aj, -A+Aj, -A-Aj, -A-Aj, -A-Aj, A+Aj, A+Aj, A+Aj, A+Aj, -A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, - A+Aj, -A+Aj, A-Aj, A-Aj, -A-Aj, A+Aj, -A-Aj, -A+Aj, -A-Aj, -A-Aj, A-Aj, -A-Aj |
| 21 | Polarization 1 | -A+Aj, A+Aj, A-Aj, A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, -A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, -A+Aj, A+Aj, -A+Aj, -A+Aj, A+Aj, A+Aj, -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj |
| | Polarization 2 | A+Aj, A-Aj, -A+Aj, A+Aj, -A+Aj, A+Aj, A-Aj, A+Aj, A-Aj, A+Aj, -A-Aj, -A-Aj, -A+Aj, A-Aj, -A+Aj, - A-Aj, A+Aj, -A-Aj, A+Aj, A+Aj, -A+Aj, -A-Aj, -A-Aj, -A-Aj, A+Aj, A+Aj, A+Aj, A+Aj, -A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, - A+Aj, -A+Aj, A-Aj, A-Aj, -A-Aj, A+Aj, -A-Aj, -A+Aj, -A-Aj, -A-Aj, A-Aj, -A-Aj |

(continued)

| Index | Polarization | Pilot sequence |
|---|---|---|
| 22 | Polarization 1 | A-Aj, -A-Aj, -A+Aj, -A-Aj, A+Aj, -A+Aj, A+Aj, -A+Aj, -A-Aj, -A+Aj, -A-Aj, -A+Aj, A-Aj, A-Aj, A+Aj, - A-Aj, A+Aj, A-Aj, -A+Aj, A-Aj, -A+Aj, -A+Aj, A+Aj, A-Aj, A-Aj, A-Aj, -A+Aj, -A+Aj, -A+Aj, -A+Aj, A+Aj, -A-Aj, -A+Aj, A+Aj, A+Aj, -A+Aj, A+Aj, A+Aj, A+Aj, -A-Aj, A-Aj, -A+Aj, -A-Aj, -A-Aj, A+Aj, - A-Aj, -A-Aj, -A-Aj, A-Aj, A+Aj, -A+Aj, A-Aj, -A-Aj, A-Aj, A-Aj, -A-Aj, -A-Aj, A+Aj, A-Aj, A+Aj, - A+Aj, -A-Aj, A+Aj, A+Aj, -A-Aj, -A-Aj, A-Aj, -A+Aj, A-Aj, A+Aj, A-Aj, A-Aj |
| | Polarization 2 | A+Aj, A-Aj, -A+Aj, A+Aj, -A+Aj, A+Aj, A-Aj, A+Aj, A-Aj, A+Aj, -A-Aj, -A-Aj, -A+Aj, A-Aj, -A+Aj, - A-Aj, A+Aj, -A-Aj, A+Aj, A+Aj, -A+Aj, -A-Aj, -A-Aj, -A-Aj, A+Aj, A+Aj, A+Aj, A+Aj, -A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, - A+Aj, -A+Aj, A-Aj, A-Aj, -A-Aj, A+Aj, -A-Aj, -A+Aj, -A-Aj, -A-Aj, A-Aj, -A-Aj |
| 23 | Polarization 1 | A-Aj, A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, - A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, -A+Aj, A+Aj, -A+Aj, -A+Aj, A+Aj, A+Aj, -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj, A+Aj, -A+Aj |
| | Polarization 2 | A+Aj, -A+Aj, -A-Aj, -A+Aj, A-Aj, -A-Aj, A-Aj, -A-Aj, -A+Aj, -A-Aj, -A+Aj, -A-Aj, A+Aj, A+Aj, A-Aj, - A+Aj, A-Aj, A+Aj, -A-Aj, A+Aj, -A-Aj, -A-Aj, A-Aj, A+Aj, A+Aj, A+Aj, -A-Aj, -A-Aj, -A-Aj, -A-Aj, A-Aj, -A+Aj, -A-Aj, A-Aj, A-Aj, -A-Aj, A-Aj, A-Aj, A-Aj, -A+Aj, A+Aj, -A-Aj, -A+Aj, -A+Aj, A-Aj, - A+Aj, -A+Aj, -A+Aj, A+Aj, A-Aj, -A-Aj, A+Aj, -A+Aj, A+Aj, A+Aj, -A+Aj, -A+Aj, A-Aj, A+Aj, A-Aj, - A-Aj, -A+Aj, A-Aj, A-Aj, -A+Aj, -A+Aj, A+Aj, -A-Aj, A+Aj, A-Aj, A+Aj, A+Aj |
| 24 | Polarization 1 | A-Aj, A+Aj, -A-Aj, A-Aj, -A-Aj, A-Aj, A+Aj, A-Aj, A+Aj, A-Aj, -A+Aj, -A+Aj, -A-Aj, A+Aj, -A-Aj, - A+Aj, A-Aj, -A+Aj, A-Aj, A-Aj, -A-Aj, -A+Aj, -A+Aj, -A+Aj, A-Aj, A-Aj, A-Aj, A-Aj, -A-Aj, A+Aj, A-Aj, -A-Aj, -A-Aj, A-Aj, -A-Aj, -A-Aj, -A-Aj, A+Aj, -A+Aj, A-Aj, A+Aj, A+Aj, -A-Aj, A+Aj, A+Aj, A+Aj, -A+Aj, -A-Aj, A-Aj, -A+Aj, A+Aj, -A+Aj, -A+Aj, A+Aj, A+Aj, -A-Aj, -A+Aj, -A-Aj, A-Aj, A+Aj, -A-Aj, -A-Aj, A+Aj, A+Aj, -A+Aj, A-Aj, -A+Aj, -A-Aj, -A+Aj, -A+Aj, A+Aj, -A+Aj |
| | Polarization 2 | A+Aj, A-Aj, -A+Aj, A+Aj, -A+Aj, A+Aj, A-Aj, A+Aj, A-Aj, A+Aj, -A-Aj, -A-Aj, -A+Aj, A-Aj, -A+Aj, - A-Aj, A+Aj, -A-Aj, A+Aj, A+Aj, -A+Aj, -A-Aj, -A-Aj, -A-Aj, A+Aj, A+Aj, A+Aj, A+Aj, -A+Aj, A-Aj, A+Aj, -A+Aj, -A+Aj, A+Aj, -A+Aj, -A+Aj, -A+Aj, A-Aj, -A-Aj, A+Aj, A-Aj, A-Aj, -A+Aj, A-Aj, A-Aj, A-Aj, -A-Aj, -A+Aj, A+Aj, -A-Aj, A-Aj, -A-Aj, -A-Aj, A-Aj, A-Aj, -A+Aj, -A-Aj, -A+Aj, A+Aj, A-Aj, - A+Aj, -A+Aj, A-Aj, A-Aj, -A-Aj, A+Aj, -A-Aj, -A+Aj, -A-Aj, -A-Aj, A-Aj, -A-Aj |
| 25 | Polarization 1 | -A-Aj, -A-Aj, -A+Aj, -A+Aj, A-Aj, A-Aj, -A+Aj, -A-Aj, -A+Aj, A+Aj, A-Aj, -A+Aj, A+Aj, A-Aj, A-Aj, - A-Aj, A-Aj, A-Aj, A+Aj, A+Aj, A-Aj, -A+Aj, -A-Aj, -A+Aj, A-Aj, -A-Aj, -A+Aj, A+Aj, A+Aj, -A+Aj, - A+Aj, A-Aj, A+Aj, -A+Aj, A-Aj, -A+Aj, A-Aj, A+Aj, -A+Aj, -A-Aj, A+Aj, A-Aj, A+Aj, A+Aj, -A+Aj, -A-Aj, A-Aj, -A+Aj, -A+Aj, A+Aj, -A-Aj, A-Aj, -A-Aj, -A-Aj, -A-Aj, A+Aj, -A-Aj, -A-Aj, -A-Aj, A+Aj, A-Aj, A-Aj, -A-Aj, A+Aj, -A-Aj, A+Aj, A+Aj, A+Aj, A-Aj, -A+Aj, -A+Aj |
| | Polarization 2 | A+Aj, A-Aj, -A+Aj, A-Aj, A-Aj, -A-Aj, -A-Aj, A+Aj, A+Aj, A+Aj, -A-Aj, A+Aj, -A+Aj, A+Aj, -A-Aj, - A+Aj, A+Aj, -A-Aj, -A-Aj, A+Aj, A-Aj, -A-Aj, A-Aj, A+Aj, -A-Aj, -A+Aj, A-Aj, -A-Aj, A-Aj, A+Aj, A+Aj, -A+Aj, A-Aj, -A-Aj, -A+Aj, -A+Aj, -A+Aj, -A+Aj, -A-Aj, A-Aj, A-Aj, A-Aj, A+Aj, -A-Aj, - A+Aj, -A+Aj, -A-Aj, A-Aj, A+Aj, -A-Aj, A+Aj, -A-Aj, -A-Aj, A-Aj, -A+Aj, A-Aj, A-Aj, A-Aj, A+Aj, A+Aj, -A+Aj, -A+Aj, -A-Aj, -A+Aj, -A+Aj, A-Aj, A+Aj, A+Aj, -A-Aj, -A+Aj |

(continued)

| Index | Polarization | Pilot sequence |
|---|---|---|
| 26 | Polarization 1 | A-Aj, -A+Aj, -A+Aj, -A+Aj, A+Aj, -A+Aj, -A+Aj, -A-Aj, A+Aj, A-Aj, A+Aj, -A-Aj, A+Aj, -A-Aj, -A+Aj, A+Aj, A-Aj, A-Aj, A-Aj, -A-Aj, A+Aj, -A+Aj, -A-Aj, -A-Aj, -A-Aj, -A-Aj, A+Aj, -A-Aj, -A+Aj, A-Aj, A-Aj, A-Aj, -A-Aj, -A+Aj, -A+Aj, -A+Aj, -A-Aj, A+Aj, -A-Aj, A+Aj, -A+Aj, A+Aj, A+Aj, -A+Aj, A+Aj, A+Aj, -A-Aj, A+Aj, A+Aj, A-Aj, A-Aj, -A+Aj, A-Aj, A-Aj, A-Aj, A-Aj, -A+Aj, -A-Aj, -A+Aj, A+Aj, A+Aj, -A-Aj, A-Aj, A+Aj, A-Aj, -A-Aj, -A-Aj, -A-Aj, A-Aj, A-Aj, -A+Aj, -A+Aj |
| | Polarization 2 | A+Aj, -A-Aj, -A-Aj, -A+Aj, -A+Aj, -A+Aj, A-Aj, A+Aj, -A+Aj, A+Aj, A-Aj, A+Aj, A+Aj, -A-Aj, -A+Aj, A-Aj, A+Aj, A-Aj, -A-Aj, A+Aj, -A-Aj, A+Aj, -A-Aj, A+Aj, A+Aj, A+Aj, A-Aj, -A+Aj, -A-Aj, A+Aj, -A-Aj, A-Aj, -A+Aj, A+Aj, -A+Aj, -A-Aj, -A+Aj, A+Aj, -A-Aj, -A-Aj, A+Aj, -A+Aj, -A-Aj, A-Aj, -A-Aj, - A+Aj, A+Aj, A+Aj, -A+Aj, A-Aj, A+Aj, -A-Aj, -A+Aj, A-Aj, -A-Aj, A-Aj, -A+Aj, -A+Aj, A-Aj, -A+Aj, - A-Aj, A-Aj, A-Aj, A-Aj, A-Aj, A-Aj, -A-Aj, -A-Aj, -A+Aj, -A+Aj, A-Aj, A-Aj |
| 27 | Polarization 1 | A-Aj, -A-Aj, A+Aj, A+Aj, -A+Aj, A-Aj, A-Aj, -A-Aj, A-Aj, A-Aj, A+Aj, A+Aj, -A+Aj, -A+Aj, -A+Aj, - A+Aj, A-Aj, -A+Aj, -A-Aj, -A-Aj, A+Aj, -A-Aj, A+Aj, -A+Aj, -A-Aj, A-Aj, A-Aj, -A-Aj, A+Aj, -A+Aj, - A+Aj, -A+Aj, -A-Aj, A-Aj, A-Aj, A-Aj, A-Aj, A-Aj, -A-Aj, -A+Aj, A-Aj, A+Aj, A+Aj, -A+Aj, -A-Aj, - A+Aj, A-Aj, -A-Aj, A+Aj, -A+Aj, -A-Aj, -A+Aj, A+Aj, -A-Aj, -A-Aj, A+Aj, A-Aj, -A-Aj, A+Aj, A-Aj, A+Aj, -A-Aj, A+Aj, A+Aj, A+Aj, -A-Aj, -A-Aj, -A+Aj, -A+Aj, A-Aj, -A+Aj, A+Aj |
| | Polarization 2 | A-Aj, A-Aj, -A+Aj, A+Aj, A+Aj, A+Aj. -A-Aj, A+Aj, -A-Aj, -A+Aj, -A+Aj, A+Aj, -A-Aj, -A-Aj, -A-Aj, A+Aj, -A-Aj, -A-Aj, -A-Aj, -A-Aj, -A+Aj, -A-Aj, A+Aj, A-Aj, A-Aj, -A+Aj, -A-Aj, A-Aj, A+Aj, A+Aj, - A+Aj, A+Aj, -A-Aj, A-Aj, A+Aj, -A+Aj, A-Aj, -A+Aj, A-Aj, A+Aj, -A+Aj, A-Aj, A-Aj, A+Aj, A+Aj, A-Aj, -A-Aj, -A+Aj, A-Aj, -A-Aj, A-Aj, -A+Aj, A+Aj, A+Aj, -A+Aj, -A+Aj, -A-Aj, -A+Aj, -A+Aj, A+Aj, A-Aj, -A+Aj, A+Aj, A-Aj, -A-Aj, A-Aj, -A+Aj, -A+Aj, A-Aj, A-Aj, -A-Aj, -A-Aj |
| 28 | Polarization 1 | -A+Aj, -A+Aj, A-Aj, A-Aj, -A-Aj, -A-Aj, -A+Aj, -A+Aj, -A+Aj, -A+Aj, -A+Aj, -A-Aj, A-Aj, -A+Aj, A-Aj, A-Aj, -A+Aj, -A-Aj, -A+Aj, A-Aj, -A-Aj, A+Aj, -A+Aj, A-Aj, A+Aj, A+Aj, A-Aj, -A-Aj, -A+Aj, -A-Aj, A-Aj, A+Aj, -A-Aj, -A-Aj, A+Aj, A-Aj, -A-Aj, A-Aj, A+Aj, A-Aj, -A+Aj, -A-Aj, A+Aj, -A-Aj, A-Aj, - A+Aj, A+Aj, A+Aj, A+Aj, -A-Aj, A+Aj, -A-Aj, A+Aj, -A-Aj, -A+Aj, A+Aj, -A+Aj, A-Aj, -A-Aj, A+Aj, A+Aj, -A+Aj, A+Aj, A-Aj, A+Aj, -A+Aj, A-Aj, A-Aj, A-Aj, -A-Aj, -A-Aj, A+Aj |
| | Polarization 2 | A-Aj, A-Aj, -A+Aj, -A+Aj, -A-Aj, -A-Aj, -A-Aj, -A+Aj, A+Aj, -A+Aj, -A-Aj, A+Aj, A+Aj, A-Aj, -A-Aj, A-Aj, -A+Aj, -A+Aj, -A+Aj, -A+Aj, A-Aj, -A+Aj, -A+Aj, A+Aj, A+Aj, -A-Aj, A+Aj, A+Aj, A-Aj, A+Aj, A+Aj, A-Aj, A+Aj, -A-Aj, A+Aj, -A-Aj, A-Aj, A-Aj, A-Aj, -A-Aj, -A+Aj, -A+Aj, -A+Aj, A-Aj, -A-Aj, A+Aj, -A-Aj, -A-Aj, -A-Aj, -A-Aj, A-Aj, A+Aj, -A-Aj, -A+Aj, -A+Aj, -A+Aj, A+Aj, A-Aj, -A-Aj, A+Aj, - A-Aj, A+Aj, -A+Aj, A+Aj, -A-Aj, A-Aj, A-Aj, A+Aj, A-Aj, A-Aj, A-Aj, -A+Aj |

**Table 25-2**

| Index | Polarization | Pilot sequence |
|---|---|---|
| 1 | Polarization 1 | -A+Aj, -A-Aj, A-Aj, -A-Aj, A+Aj, -A-Aj, -A+Aj, A-Aj, A+Aj, -A+Aj, A+Aj, A+Aj, -A-Aj, -A-Aj, A-Aj, -A+Aj, -A+Aj, A-Aj, -A-Aj, -A+Aj, A+Aj, -A-Aj, -A+Aj, -A+Aj, A+Aj, -A-Aj, A-Aj, -A+Aj, A-Aj, - A+Aj, -A-Aj, A+Aj, A+Aj, A+Aj, A-Aj, -A+Aj, A-Aj, -A+Aj, A-Aj, -A-Aj, A+Aj, A-Aj, A+Aj, -A-Aj, - A+Aj, A+Aj, A-Aj, A+Aj, A+Aj, -A+Aj, A-Aj, A+Aj, -A+Aj, -A+Aj, -A-Aj, -A-Aj, -A+Aj, A+Aj, -A-Aj, A-Aj, -A-Aj, -A-Aj, A-Aj, A+Aj, A+Aj, -A-Aj, A-Aj, A+Aj, A-Aj, -A-Aj, A-Aj, -A-Aj |
| | Polarization 2 | -A-Aj, -A+Aj, -A+Aj, A-Aj, -A-Aj, A-Aj, A-Aj, A+Aj, A+Aj, -A-Aj, -A+Aj, A-Aj, -A+Aj, A-Aj, A+Aj, A-Aj, -A+Aj, -A+Aj, -A+Aj, A+Aj, -A+Aj, -A+Aj, -A-Aj, A-Aj, A-Aj, A+Aj, -A+Aj, A+Aj, -A+Aj, A+Aj, -A-Aj, A+Aj, -A-Aj, -A-Aj, -A+Aj, A-Aj, -A+Aj, -A-Aj, -A-Aj, A-Aj, -A-Aj, -A-Aj, -A-Aj, -A-Aj, A+Aj, -A+Aj, A+Aj, A-Aj, -A+Aj, A-Aj, A-Aj, A+Aj, A+Aj, -A+Aj, A+Aj, -A+Aj, A-Aj, A-Aj, -A-Aj, A+Aj, -A-Aj, A-Aj, A+Aj, -A-Aj, A+Aj, A-Aj, -A+Aj, A-Aj, A+Aj, -A+Aj, -A-Aj, A-Aj |

(continued)

| Index | Polarization | Pilot sequence |
|---|---|---|
| 2 | Polarization 1 | -A-Aj, -A+Aj, -A-Aj, -A+Aj, A+Aj, -A+Aj, -A-Aj, A+Aj, A+Aj, -A+Aj, -A-Aj, -A-Aj, -A+Aj, -A-Aj, A+Aj, A-Aj, -A-Aj, -A-Aj, A-Aj, A-Aj, A+Aj, -A+Aj, A-Aj, A+Aj, A+Aj, -A+Aj, A+Aj, A-Aj, -A-Aj, A+Aj, -A+Aj, A+Aj, -A-Aj, -A+Aj, A-Aj, -A+Aj, A-Aj, -A+Aj, A+Aj, A+Aj, A+Aj, -A-Aj, A-Aj, -A+Aj, A-Aj, -A+Aj, -A-Aj, A+Aj, A-Aj, A-Aj, -A-Aj, A+Aj, A-Aj, -A-Aj, -A+Aj, A-Aj, A-Aj, -A+Aj, - A-Aj, -A-Aj, A+Aj, A+Aj, A-Aj, A+Aj, -A+Aj, A-Aj, -A-Aj, A+Aj, -A-Aj, -A+Aj, -A-Aj, A-Aj |
| | Polarization 2 | -A+Aj, -A-Aj, A-Aj, A+Aj, -A+Aj, A-Aj, -A+Aj, A+Aj, -A-Aj, A+Aj, -A+Aj, -A-Aj, A+Aj, -A-Aj, - A+Aj, -A+Aj, A-Aj, A+Aj, A-Aj, A+Aj, A+Aj, -A+Aj, -A+Aj, A-Aj, -A+Aj, A+Aj, A-Aj, A+Aj, -A-Aj, -A-Aj, -A-Aj, -A-Aj, -A+Aj, -A-Aj, -A-Aj, A-Aj, -A+Aj, A-Aj, -A-Aj, -A-Aj, A+Aj, -A-Aj, A+Aj, A-Aj, A+Aj, A-Aj, A+Aj, -A+Aj, -A+Aj, -A-Aj, A-Aj, A-Aj, A+Aj, A-Aj, A-Aj, A-Aj, -A+Aj, A+Aj, - A+Aj, A-Aj, -A+Aj, A-Aj, -A-Aj, A+Aj, A+Aj, -A+Aj, -A+Aj, -A-Aj, -A+Aj, A-Aj, A-Aj, -A-Aj |

**Table 25-3**

| Index | Pilot sequence |
|---|---|
| 1 | -A-Aj, A-Aj, -A-Aj, -A+Aj, -A-Aj, -A+Aj, A-Aj, -A-Aj, A-Aj, A+Aj, -A+Aj, -A-Aj, A+Aj, A+Aj, -A-Aj, -A+Aj, -A-Aj, A-Aj, A-Aj, -A-Aj, -A-Aj, A-Aj, -A+Aj, A+Aj, -A-Aj, -A-Aj, A-Aj, A-Aj, A+Aj, -A-Aj, A-Aj, A+Aj, A-Aj, -A-Aj, A+Aj, -A+Aj, -A+Aj, -A+Aj, A+Aj, -A+Aj, -A+Aj, A-Aj, A+Aj, -A+Aj, A+Aj, A+Aj, A+Aj, A-Aj, -A-Aj, -A-Aj, - A+Aj, -A+Aj, A+Aj, A-Aj, -A+Aj, A-Aj, -A+Aj, -A-Aj, A+Aj, -A-Aj, -A-Aj, -A+Aj, A-Aj, A+Aj, A-Aj, A+Aj, A+Aj, -A+Aj, A+Aj, -A-Aj, A+Aj, A-Aj |
| 2 | -A+Aj, A+Aj, -A+Aj, A+Aj, A-Aj, A+Aj, A-Aj, -A+Aj, A+Aj, -A+Aj, -A-Aj, A-Aj, A+Aj, -A-Aj, -A-Aj, A+Aj, A-Aj, A+Aj, -A+Aj, -A+Aj, A+Aj, A+Aj, -A+Aj, A-Aj, -A-Aj, A+Aj, A+Aj, -A+Aj, -A+Aj, -A-Aj, A+Aj, -A+Aj, -A-Aj, - A+Aj, A+Aj, -A-Aj, A-Aj, A-Aj, A-Aj, -A-Aj, A-Aj, A-Aj, -A+Aj, -A-Aj, A-Aj, -A-Aj, -A-Aj, -A-Aj, -A+Aj, A+Aj, A+Aj, A-Aj, A-Aj, -A-Aj, -A+Aj, A-Aj, -A+Aj, A-Aj, A+Aj, -A-Aj, A+Aj, A+Aj, A-Aj, -A+Aj, -A-Aj, -A+Aj, -A-Aj, -A-Aj, A-Aj, -A-Aj, A+Aj, -A-Aj |
| 3 | A-Aj, -A-Aj, A-Aj, -A-Aj, -A+Aj, -A-Aj, -A+Aj, A-Aj, -A-Aj, A-Aj, A+Aj, -A+Aj, -A-Aj, A+Aj, A+Aj, -A-Aj, -A+Aj, -A-Aj, A-Aj, A-Aj, -A-Aj, -A-Aj, A-Aj, -A+Aj, A+Aj, -A-Aj, -A-Aj, A-Aj, A-Aj, A+Aj, -A-Aj, A-Aj, A+Aj, A-Aj, -A- Aj, A+Aj, -A+Aj, -A+Aj, -A+Aj, A+Aj, -A+Aj, -A+Aj, A-Aj, A+Aj, -A+Aj, A+Aj, A+Aj, A+Aj, A-Aj, -A-Aj, -A-Aj, - A+Aj, -A+Aj, A+Aj, A-Aj, -A+Aj, A-Aj, -A+Aj, -A-Aj, A+Aj, -A-Aj, -A-Aj, -A+Aj, A-Aj, A+Aj, A-Aj, A+Aj, A+Aj, -A+Aj, A+Aj, -A-Aj, A+Aj |
| 4 | A+Aj, -A+Aj, A+Aj, A-Aj, A+Aj, A-Aj, -A+Aj, A+Aj, -A+Aj, -A-Aj, A-Aj, A+Aj, -A-Aj, -A-Aj, A+Aj, A-Aj, A+Aj, - A+Aj, -A+Aj, A+Aj, A+Aj, -A+Aj, A-Aj, -A-Aj, A+Aj, A+Aj, -A+Aj, -A+Aj, -A-Aj, A+Aj, -A+Aj, -A-Aj, -A+Aj, A+Aj, -A-Aj, A-Aj, A-Aj, A-Aj, -A-Aj, A-Aj, A-Aj, -A+Aj, -A-Aj, A-Aj, -A-Aj, -A-Aj, -A-Aj, -A+Aj, A+Aj, A+Aj, A- Aj, A-Aj, -A-Aj, -A+Aj, A-Aj, -A+Aj, A-Aj, A+Aj, -A-Aj, A+Aj, A+Aj, A-Aj, -A+Aj, -A-Aj, -A+Aj, -A-Aj, -A-Aj, A- Aj, -A-Aj, A+Aj, -A-Aj, -A+Aj |

**Table 25-4**

| Index | Pilot sequence |
|---|---|
| 1 | -A-Aj, A-Aj, -A-Aj, A-Aj, A+Aj, A-Aj, A+Aj, -A-Aj, A-Aj, -A-Aj, -A+Aj, A+Aj, A-Aj, -A+Aj, -A+Aj, A-Aj, A+Aj, A- Aj, -A-Aj, -A-Aj, A-Aj, A-Aj, -A-Aj, A+Aj, -A+Aj, A-Aj, A-Aj, -A-Aj, -A-Aj, -A+Aj, A-Aj, -A-Aj, -A+Aj, -A-Aj, A- Aj, -A+Aj, A+Aj, A+Aj, A+Aj, -A+Aj, A+Aj, A+Aj, -A-Aj, -A+Aj, A+Aj, -A+Aj, -A+Aj, -A+Aj, -A-Aj, A-Aj, A-Aj, A+Aj, A+Aj, -A+Aj, -A-Aj, A+Aj, -A-Aj, A+Aj, A-Aj, -A+Aj, A-Aj, A-Aj, A+Aj, -A-Aj, -A+Aj, -A-Aj, -A+Aj, - A+Aj, A+Aj, -A+Aj, A-Aj, -A+Aj |
| 2 | -A+Aj, A+Aj, -A+Aj, -A-Aj, -A+Aj, -A-Aj, A+Aj, -A+Aj, A+Aj, A-Aj, -A-Aj, -A+Aj, A-Aj, A-Aj, -A+Aj, -A-Aj, - A+Aj, A+Aj, A+Aj, -A+Aj, -A+Aj, A+Aj, -A-Aj, A-Aj, -A+Aj, -A+Aj, A+Aj, A+Aj, A-Aj, -A+Aj, A+Aj, A-Aj, A+Aj, -A+Aj, A-Aj, -A-Aj, -A-Aj, -A-Aj, -A-Aj, A-Aj, -A-Aj, -A-Aj, A+Aj, A-Aj, -A-Aj, A-Aj, A-Aj, A-Aj, A+Aj, -A+Aj, -A+Aj, - A-Aj, -A-Aj, A-Aj, A+Aj, -A-Aj, A+Aj, -A-Aj, -A+Aj, A-Aj, -A+Aj, -A+Aj, -A-Aj, A+Aj, A-Aj, A+Aj, A-Aj, A-Aj, - A-Aj, A-Aj, -A+Aj, A-Aj, A+Aj |

(continued)

| Index | Pilot sequence |
|---|---|
| 3 | A-Aj, -A-Aj, A-Aj, A+Aj, A-Aj, A+Aj, -A-Aj, A-Aj, -A-Aj, -A+Aj, A+Aj, A-Aj, -A+Aj, -A+Aj, A-Aj, A+Aj, A-Aj, - A-Aj, -A-Aj, A-Aj, A-Aj, -A-Aj, A+Aj, -A+Aj, A-Aj, A-Aj, -A-Aj, -A-Aj, -A+Aj, A-Aj, -A-Aj, -A+Aj, -A-Aj, A-Aj, - A+Aj, A+Aj, A+Aj, A+Aj, -A+Aj, A+Aj, A+Aj, -A-Aj, -A+Aj, A+Aj, -A+Aj, -A+Aj, -A+Aj, -A-Aj, A-Aj, A-Aj, A+Aj, A+Aj, -A+Aj, -A-Aj, A+Aj, -A-Aj, A+Aj, A-Aj, -A+Aj, A-Aj, A-Aj, A+Aj, -A-Aj, -A+Aj, -A-Aj, -A+Aj, - A+Aj, A+Aj, -A+Aj, A-Aj, -A+Aj, -A-Aj |
| 4 | A+Aj, -A+Aj, A+Aj, -A+Aj, -A-Aj, -A+Aj, -A-Aj, A+Aj, -A+Aj, A+Aj, A-Aj, -A-Aj, -A+Aj, A-Aj, A-Aj, -A+Aj, -A-Aj, -A+Aj, A+Aj, A+Aj, -A+Aj, -A+Aj, A+Aj, -A-Aj, A-Aj, -A+Aj, -A+Aj, A+Aj, A+Aj, A-Aj, -A+Aj, A+Aj, A-Aj, A+Aj, -A+Aj, A-Aj, -A-Aj, -A-Aj, -A-Aj, A-Aj, -A-Aj, -A-Aj, A+Aj, A-Aj, -A-Aj, A-Aj, A-Aj, A-Aj, A+Aj, -A+Aj, - A+Aj, -A-Aj, -A-Aj, A-Aj, A+Aj, -A-Aj, A+Aj, -A-Aj, -A+Aj, A-Aj, -A+Aj, -A+Aj, -A-Aj, A+Aj, A-Aj, A+Aj, A-Aj, A-Aj, -A-Aj, A-Aj, -A+Aj, A-Aj |

**Table 25-5**

| Index | Pilot sequence |
|---|---|
| 1 | -A-Aj, A+Aj, -A-Aj, -A+Aj, -A-Aj, -A-Aj, A-Aj, -A-Aj, A-Aj, -A+Aj, A+Aj, A+Aj, -A-Aj, A+Aj, -A+Aj, A-Aj, -A+Aj, A-Aj, -A-Aj, -A+Aj, -A+Aj, A+Aj, A+Aj, A-Aj, -A-Aj, -A-Aj, -A-Aj, -A+Aj, -A-Aj, A-Aj, -A+Aj, - A+Aj, -A-Aj, -A+Aj, -A+Aj, -A+Aj, -A-Aj, A+Aj, A-Aj, -A-Aj, A-Aj, A+Aj, -A-Aj, A-Aj, A-Aj, A+Aj, A+Aj, - A-Aj, -A+Aj, A-Aj, A+Aj, A+Aj, A-Aj, A-Aj, A+Aj, -A+Aj, A+Aj, -A-Aj, -A-Aj, A+Aj, -A+Aj, -A-Aj, A-Aj, A+Aj, A-Aj, -A+Aj, A+Aj, -A+Aj, A+Aj, A-Aj, A+Aj, A-Aj |
| 2 | -A+Aj, A+Aj, -A-Aj, A+Aj, A-Aj, A+Aj, A+Aj, -A+Aj, A+Aj, -A+Aj, A-Aj, -A-Aj, -A-Aj, A+Aj, -A-Aj, A-Aj, -A+Aj, A-Aj, -A+Aj, A+Aj, A-Aj, A-Aj, -A-Aj, -A-Aj, -A+Aj, A+Aj, A+Aj, A+Aj, A-Aj, A+Aj, -A+Aj, A-Aj, A-Aj, A+Aj, A- Aj, A-Aj, A-Aj, A+Aj, -A-Aj, -A+Aj, A+Aj, -A+Aj, -A-Aj, A+Aj, -A+Aj, -A+Aj, -A-Aj, -A-Aj, A+Aj, A-Aj, -A+Aj, -A-Aj, -A-Aj, -A+Aj, -A+Aj, -A-Aj, A-Aj, -A-Aj, A+Aj, A+Aj, -A-Aj, A-Aj, A+Aj, - A+Aj, -A-Aj, -A+Aj, A-Aj, -A- Aj, A-Aj, -A-Aj, -A+Aj, -A-Aj |
| 3 | A-Aj, -A-Aj, A+Aj, -A-Aj, -A+Aj, -A-Aj, -A-Aj. A-Aj, -A-Aj, A-Aj, -A+Aj, A+Aj, A+Aj, -A-Aj, A+Aj, -A+Aj, A-Aj, -A+Aj, A-Aj, -A-Aj, -A+Aj, -A+Aj, A+Aj. A+Aj, A-Aj, -A-Aj, -A-Aj, -A-Aj, -A+Aj, -A-Aj, A-Aj, - A+Aj, -A+Aj, -A- Aj, -A+Aj, -A+Aj, -A+Aj, -A-Aj, A+Aj, A-Aj, -A-Aj, A-Aj, A+Aj, -A-Aj, A-Aj, A-Aj, A+Aj, A+Aj, -A-Aj, -A+Aj, A- Aj, A+Aj, A+Aj, A-Aj, A-Aj, A+Aj, -A+Aj, A+Aj, -A-Aj, -A-Aj, A+Aj, -A+Aj, -A-Aj, A-Aj, A+Aj, A-Aj, -A+Aj, A+Aj, -A+Aj, A+Aj, A-Aj, A+Aj |
| 4 | A+Aj, -A-Aj, A+Aj, A-Aj, A+Aj, A+Aj, -A+Aj, A+Aj, -A+Aj, A-Aj, -A-Aj, -A-Aj, A+Aj, -A-Aj, A-Aj, -A+Aj, A-Aj, -A+Aj, A+Aj, A-Aj, A-Aj, -A-Aj, -A-Aj, -A+Aj, A+Aj, A+Aj, A+Aj, A-Aj, A+Aj, -A+Aj, A-Aj, A-Aj, A+Aj, A-Aj, A- Aj, A-Aj, A+Aj, -A-Aj, -A+Aj, A+Aj, -A+Aj, -A-Aj, A+Aj, -A+Aj, -A+Aj, -A-Aj, -A-Aj, A+Aj, A-Aj, -A+Aj, -A-Aj, -A-Aj, -A+Aj, -A+Aj, -A-Aj, A-Aj, -A-Aj, A+Aj, A+Aj, -A-Aj, A-Aj, A+Aj, - A+Aj, -A-Aj, -A+Aj, A-Aj, -A-Aj, A-Aj, -A-Aj, -A+Aj, -A-Aj, -A+Aj |

**Table 25-6**

| Index | Pilot sequence |
|---|---|
| 1 | -A-Aj, A-Aj, -A+Aj, A-Aj, A+Aj, A-Aj, A-Aj, -A-Aj, A-Aj, -A-Aj, A+Aj, -A+Aj, -A+Aj, A-Aj, -A+Aj, A+Aj, -A-Aj, A+Aj, -A-Aj, A-Aj, A+Aj, A+Aj, -A+Aj. -A+Aj, -A-Aj, A-Aj, A-Aj, A-Aj, A+Aj, A-Aj, -A-Aj, A+Aj, A+Aj, A-Aj, A+Aj, A+Aj, A+Aj, A-Aj, -A+Aj, -A-Aj, A-Aj, -A-Aj, -A+Aj, A-Aj, -A-Aj, -A-Aj, -A+Aj, - A+Aj, A-Aj, A+Aj, -A-Aj, -A+Aj, -A+Aj, -A-Aj, -A-Aj, -A+Aj, A+Aj, -A+Aj, A-Aj, A-Aj, -A+Aj, A+Aj, A-Aj, -A-Aj, -A+Aj, -A-Aj, A+Aj, -A+Aj, A+Aj, -A+Aj, -A-Aj, -A+Aj |
| 2 | -A+Aj, A-Aj, -A+Aj, -A-Aj, -A+Aj, -A+Aj, A+Aj, -A+Aj, A+Aj, -A-Aj, A-Aj, A-Aj, -A+Aj, A-Aj, -A-Aj, A+Aj, -A-Aj, A+Aj, -A+Aj, -A-Aj, -A-Aj, A-Aj, A-Aj, A+Aj, -A+Aj, -A+Aj, -A+Aj, -A-Aj, -A+Aj, A+Aj, - A-Aj, -A-Aj, -A+Aj, -A- Aj, -A-Aj, -A-Aj, -A+Aj, A-Aj, A+Aj, -A+Aj, A+Aj, A-Aj, -A+Aj, A+Aj, A+Aj, A-Aj, A-Aj, -A+Aj, -A-Aj, A+Aj, A- Aj, A-Aj, A+Aj, A+Aj, A-Aj, -A-Aj, A-Aj, -A+Aj, -A+Aj, A-Aj, -A-Aj, - A+Aj, A+Aj, A-Aj, A+Aj, -A-Aj, A-Aj, -A- Aj, A-Aj, A+Aj, A-Aj, A+Aj |

(continued)

| Index | Pilot sequence |
|---|---|
| 3 | A-Aj, -A+Aj, A-Aj, A+Aj, A-Aj, A-Aj, -A-Aj, A-Aj, -A-Aj, A+Aj, -A+Aj, -A+Aj, A-Aj, -A+Aj, A+Aj, -A-Aj, A+Aj, -A-Aj, A-Aj, A+Aj, A+Aj, -A+Aj, -A+Aj, -A-Aj, A-Aj, A-Aj, A-Aj, A+Aj, A-Aj, -A-Aj, A+Aj, A+Aj, A-Aj, A+Aj, A+Aj, A+Aj, A-Aj, -A+Aj, -A-Aj, A-Aj, -A-Aj, -A+Aj, A-Aj, -A-Aj, -A-Aj, -A+Aj, -A+Aj, A-Aj, A+Aj, -A-Aj, -A+Aj, -A+Aj, -A-Aj, -A-Aj, -A+Aj, A+Aj, -A+Aj, A-Aj, A-Aj, -A+Aj, A+Aj, A-Aj, -A-Aj, -A+Aj, -A-Aj, A+Aj, -A+Aj, A+Aj, -A+Aj, -A-Aj, -A+Aj, -A-Aj |
| 4 | A+Aj, -A+Aj, A-Aj, -A+Aj, -A-Aj, -A+Aj, -A+Aj, A+Aj, -A+Aj, A+Aj, -A-Aj, A-Aj, A-Aj, -A+Aj, A-Aj, -A-Aj, A+Aj, -A-Aj, A+Aj, -A+Aj, -A-Aj, -A-Aj, A-Aj, A-Aj, A+Aj, -A+Aj, -A+Aj, -A+Aj, -A-Aj, -A+Aj, A+Aj, -A-Aj, -A-Aj, -A+Aj, -A-Aj, -A-Aj, -A-Aj, -A+Aj, A-Aj, A+Aj, -A+Aj, A+Aj, A-Aj, -A+Aj, A+Aj, A+Aj, A-Aj, A-Aj, -A+Aj, -A-Aj, A+Aj, A-Aj, A-Aj, A+Aj, A+Aj, A-Aj, -A-Aj, A-Aj, -A+Aj, -A+Aj, A-Aj, - A-Aj, -A+Aj, A+Aj, A-Aj, A+Aj, -A-Aj, A-Aj, -A-Aj, A-Aj, A+Aj, A-Aj |

(19) Particularly, when $N_{PS}$ = 75, the pilot sequence is one item in the following Table 26.

**Table 26**

| Index | Polarization | Pilot sequence |
|---|---|---|
| 1 | Polarization 1 | -A+Aj, -A-Aj, A+Aj, A-Aj, A-Aj, A+Aj, -A+Aj, -A+Aj, A+Aj, A-Aj, -A+Aj, -A+Aj, A+Aj, -A+Aj, -A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, A-Aj, - A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj, -A+Aj |
| | Polarization 2 | -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, - A+Aj, -A+Aj, A+Aj, A-Aj, A-Aj, A+Aj. A-Aj, A+Aj, A-Aj, -A-Aj, A+Aj, A+Aj, -A-Aj, A+Aj, -A-Aj, A-Aj, - A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, - A+Aj, -A-Aj, -A-Aj, -A-Aj, A+Aj, -A+Aj, A+Aj, A+Aj, -A-Aj, -A-Aj, -A+Aj, -A+Aj, A-Aj, -A-Aj |
| 2 | Polarization 1 | -A+Aj, -A-Aj, A+Aj, A-Aj, A-Aj, A+Aj, -A+Aj, -A+Aj, A+Aj, A-Aj, -A+Aj, -A+Aj, A+Aj, -A+Aj, -A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, A-Aj, - A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj, -A+Aj |
| | Polarization 2 | A+Aj, A-Aj, -A+Aj, -A-Aj, -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, -A-Aj, A-Aj, -A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj, A+Aj |
| 3 | Polarization 1 | -A+Aj, -A-Aj, A+Aj, A-Aj, A-Aj, A+Aj, -A+Aj, -A+Aj, A+Aj, A-Aj, -A+Aj, -A+Aj, A+Aj, -A+Aj, -A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, -A-Aj, A+Aj, A-Aj, A+Aj, -A+Aj, A-Aj, A-Aj, -A+Aj, A-Aj, -A+Aj, A+Aj, A-Aj, - A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj, -A+Aj |
| | Polarization 2 | A+Aj, A+Aj, A-Aj, -A+Aj, -A-Aj, -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A-Aj, A-Aj, -A+Aj, -A+Aj, A-Aj, A-Aj, -A-Aj, -A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj |

(continued)

| Index | Polarization | Pilot sequence |
|---|---|---|
| 4 | Polarization 1 | -A+Aj, -A+Aj, -A-Aj, A+Aj, A-Aj, A-Aj, A+Aj, -A+Aj, -A+Aj, A+Aj, A-Aj, -A+Aj, -A+Aj, A+Aj, -A+Aj, - A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, -A-Aj, -A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj |
| | Polarization 2 | -A-Aj, -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, - A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, - A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, - A+Aj, -A-Aj, -A-Aj, -A-Aj, A+Aj, -A+Aj, A+Aj, A+Aj, -A-Aj, -A-Aj, -A+Aj, -A+Aj, A-Aj |
| 5 | Polarization 1 | -A+Aj, -A+Aj, -A-Aj, A+Aj, A-Aj, A-Aj, A+Aj, -A+Aj, -A+Aj, A+Aj, A-Aj, -A+Aj, -A+Aj, A+Aj, -A+Aj, - A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A+Aj, A+Aj, -A-Aj, -A+Aj, -A-Aj, -A-Aj, -A-Aj, -A-Aj, A+Aj, A-Aj, -A+Aj, A-Aj, A- Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj |
| | Polarization 2 | -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A- Aj, A-Aj, - A+Aj, -A+Aj, A+Aj, A-Aj, A-Aj, A+Aj. A-Aj, A+Aj, A-Aj, -A-Aj, A+Aj, A+Aj, -A-Aj, A+Aj, -A-Aj, A-Aj, - A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, - A+Aj, -A-Aj, -A-Aj, -A-Aj, A+Aj, -A+Aj, A+Aj, A+Aj, -A-Aj, -A-Aj, -A+Aj, -A+Aj, A-Aj, -A-Aj |
| 6 | Polarization 1 | -A+Aj, -A+Aj, -A-Aj, A+Aj, A-Aj, A-Aj, A+Aj, -A+Aj, -A+Aj, A+Aj, A-Aj, -A+Aj, -A+Aj, A+Aj, -A+Aj, - A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj, A+Aj, -A+Aj, A-Aj, A-Aj, -A+Aj, A-Aj, -A-Aj, -A+Aj, A+Aj, -A-Aj, -A+Aj, -A-Aj, -A-Aj, -A-Aj, -A-Aj, A+Aj, A-Aj, -A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj |
| | Polarization 2 | A+Aj, A-Aj, -A+Aj, -A-Aj, -A-Aj, -A+Aj, A+Aj, A+Aj, -A+Aj, -A-Aj, A+Aj, A+Aj, -A+Aj, A+Aj, A- Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj, A+Aj |
| 7 | Polarization 1 | -A+Aj, -A+Aj, -A-Aj, A+Aj, A-Aj, A-Aj, A+Aj, -A+Aj, -A+Aj, A+Aj, A-Aj, -A+Aj, -A+Aj, A+Aj, -A+Aj, - A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, -A-Aj, A+Aj, A-Aj, A+Aj, -A+Aj, A-Aj, A-Aj, -A+Aj, A-Aj, -A+Aj, A+Aj, -A-Aj, -A+Aj, -A-Aj, -A-Aj, -A-Aj, -A-Aj, A+Aj, A-Aj, -A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj |
| | Polarization 2 | A+Aj, A+Aj, A-Aj, -A+Aj, -A-Aj, -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A- Aj, -A+Aj, -A+Aj, A-Aj, A-Aj, -A-Aj, -A+Aj, -A+Aj, -A-Aj, -A+Aj, -A-Aj, -A+Aj, A+Aj, -A-Aj, -A- Aj, A+Aj, -A-Aj, A+Aj, - A+Aj, A-Aj, A+Aj, A-Aj, A-Aj, A-Aj, A-Aj, -A+Aj, -A-Aj, A+Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj |

(continued)

| Index | Polarization | Pilot sequence |
|---|---|---|
| 8 | Polarization 1 | A-Aj, A-Aj, A+Aj, -A-Aj, -A+Aj, -A+Aj, -A-Aj, A-Aj, A-Aj, -A-Aj, -A+Aj, A-Aj, A-Aj, -A-Aj, A-Aj, A+Aj, -A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj, -A-Aj, -A+Aj, A-Aj, - A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj |
| | Polarization 2 | -A-Aj, -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, - A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, - A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, - A+Aj, -A-Aj, -A-Aj, -A-Aj, A+Aj, -A+Aj, A+Aj, A+Aj, -A-Aj, -A-Aj, -A+Aj, -A+Aj, A-Aj |
| 9 | Polarization 1 | A-Aj, A-Aj, A+Aj, -A-Aj, -A+Aj, -A+Aj, -A-Aj, A-Aj, A-Aj, -A-Aj, -A+Aj, A-Aj, A-Aj, -A-Aj, A-Aj, A+Aj, -A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj, A-Aj, -A+Aj, A-Aj, - A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj |
| | Polarization 2 | -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, - A+Aj, -A+Aj, A+Aj, A-Aj, A-Aj, A+Aj. A-Aj, A+Aj, A-Aj, -A-Aj, A+Aj, A+Aj, -A-Aj, A+Aj, -A-Aj, A-Aj, - A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, - A+Aj, -A-Aj, -A-Aj, -A-Aj, A+Aj, -A+Aj, A+Aj, A+Aj, -A-Aj, -A-Aj, -A+Aj, -A+Aj, A-Aj, -A-Aj |
| 10 | Polarization 1 | A-Aj, A-Aj, A+Aj, -A-Aj, -A+Aj, -A+Aj, -A-Aj, A-Aj, A-Aj, -A-Aj, -A+Aj, A-Aj, A-Aj, -A-Aj, A-Aj, A+Aj, -A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj, A-Aj, -A+Aj, A-Aj, - A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj |
| | Polarization 2 | A+Aj, A-Aj, -A+Aj, -A-Aj, -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj, A+Aj |
| 11 | Polarization 1 | A-Aj, A-Aj, A+Aj, -A-Aj, -A+Aj, -A+Aj, -A-Aj, A-Aj, A-Aj, -A-Aj, -A+Aj, A-Aj, A-Aj, -A-Aj, A-Aj, A+Aj, -A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj, A-Aj, -A+Aj, A-Aj, - A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj |
| | Polarization 2 | A+Aj, A+Aj, A-Aj, -A+Aj, -A-Aj, -A-Aj, -A+Aj, A+Aj, A+Aj, -A+Aj, -A-Aj, A+Aj, A+Aj, -A+Aj, A+Aj, A-Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, -A+Aj, -A-Aj, -A+Aj, A+Aj, -A-Aj, -A-Aj, -A+Aj, A+Aj, -A-Aj, -A-Aj, A-Aj, A-Aj, A+Aj, -A-Aj, A+Aj, -A-Aj, -A-Aj, -A-Aj, -A+Aj, -A-Aj, A+Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj |

(continued)

| Index | Polarization | Pilot sequence |
|---|---|---|
| 12 | Polarization 1 | A-Aj, A+Aj, -A-Aj, -A+Aj, -A+Aj, -A-Aj, A-Aj, A-Aj, -A-Aj, -A+Aj, A-Aj, A-Aj, -A-Aj, A-Aj, A+Aj, - A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj, A-Aj |
| | Polarization 2 | -A-Aj, -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, - A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, -A+Aj, -A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, - A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, - A+Aj, -A-Aj, -A-Aj, -A-Aj, A+Aj, -A+Aj, A+Aj, A+Aj, -A-Aj, -A-Aj, -A+Aj, -A+Aj, A-Aj |
| 13 | Polarization 1 | A-Aj, A+Aj, -A-Aj, -A+Aj, -A+Aj, -A-Aj, A-Aj, A-Aj, -A-Aj, -A+Aj, A-Aj, A-Aj, -A-Aj, A-Aj, A+Aj, - A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A-Aj, A+Aj, A+Aj, -A+Aj, -A-Aj, -A-Aj, -A+Aj, -A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A+Aj, A+Aj, A+Aj, A-Aj, A-Aj, A-Aj, -A+Aj, A+Aj, -A+Aj, -A+Aj, A-Aj, A-Aj, A+Aj, A+Aj, -A-Aj, A-Aj |
| | Polarization 2 | -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A- Aj, A-Aj, - A+Aj, -A+Aj, A+Aj, A-Aj, A-Aj, A+Aj. A-Aj, A+Aj, A-Aj, -A-Aj, A+Aj, A+Aj, -A-Aj, A+Aj, -A-Aj, A-Aj, - A+Aj, -A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, - A+Aj, -A-Aj, -A-Aj, -A-Aj, A+Aj, -A+Aj, A+Aj, A+Aj, -A-Aj, -A-Aj, -A+Aj, -A+Aj, A-Aj, -A-Aj |
| 14 | Polarization 1 | A-Aj, A+Aj, -A-Aj, -A+Aj, -A+Aj, -A-Aj, A-Aj, A-Aj, -A-Aj, -A+Aj, A-Aj, A-Aj, -A-Aj, A-Aj, A+Aj, - A+Aj, A+Aj, A-Aj, A+Aj, -A-Aj, A-Aj, -A-Aj, A+Aj, -A+Aj, A-Aj, -A-Aj, -A-Aj, A+Aj, -A-Aj, -A-Aj, A+Aj, A+Aj, -A+Aj, -A-Aj, -A-Aj, -A+Aj, -A-Aj, -A+Aj, -A-Aj, A-Aj, -A+Aj, -A+Aj, A-Aj, -A+Aj, A-Aj, -A-Aj, A+Aj, A-Aj, A+Aj, A+Aj, A+Aj, A+Aj, -A-Aj, -A+Aj, A-Aj, -A+Aj, -A+Aj, -A+Aj, -A-Aj, -A-Aj, A-Aj, -A+Aj, A+Aj, A+Aj, -A-Aj, A-Aj, A-Aj, -A+Aj, A+Aj, -A+Aj, -A+Aj, A-Aj, A-Aj, A+Aj, A+Aj, -A-Aj, A-Aj |
| | Polarization 2 | A+Aj, A-Aj, -A+Aj, -A-Aj, -A-Aj, -A+Aj, A+Aj, A+Aj, -A+Aj, -A-Aj, A+Aj, A+Aj, -A+Aj, A+Aj, A- Aj, -A-Aj, A-Aj, A+Aj, A-Aj, -A+Aj, A+Aj, -A+Aj, A-Aj, -A-Aj, A+Aj, -A+Aj, -A+Aj, A-Aj, -A+Aj, -A+Aj, A-Aj, A-Aj, -A-Aj, -A+Aj, -A+Aj, -A-Aj, -A+Aj, -A-Aj, -A+Aj, A+Aj, -A-Aj, -A-Aj, A+Aj, -A-Aj, A+Aj, -A+Aj, A-Aj, A+Aj, A-Aj, A-Aj, A-Aj, A-Aj, -A+Aj, -A-Aj, A+Aj, -A-Aj, -A-Aj, -A-Aj, -A+Aj, -A-Aj, A-Aj, A-Aj, A+Aj, A+Aj, A+Aj, -A-Aj, A-Aj, -A-Aj, -A-Aj, A+Aj, A+Aj, A-Aj, A-Aj, -A+Aj, A+Aj |
| 15 | Polarization 1 | -A+Aj, -A-Aj, A+Aj, A+Aj, -A+Aj, -A+Aj, A-Aj, A-Aj, A+Aj, A-Aj, -A+Aj, -A+Aj, -A+Aj, A+Aj, A+Aj, A-Aj, -A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, -A-Aj, A-Aj, A+Aj, A+Aj, -A-Aj, -A-Aj, A+Aj, -A-Aj, -A-Aj, -A+Aj, A-Aj, A+Aj, -A-Aj, -A+Aj, -A-Aj, A+Aj, -A+Aj, A+Aj, A-Aj, A+Aj, -A+Aj, -A-Aj, -A+Aj, -A+Aj, A-Aj, -A-Aj, -A+Aj, -A+Aj, -A-Aj, A-Aj, A-Aj, -A- Aj, A+Aj, -A+Aj |
| | Polarization 2 | -A-Aj, -A+Aj, A-Aj, A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, -A-Aj, -A+Aj, A+Aj, -A+Aj, A+Aj, -A+Aj, -A+Aj, A+Aj, A-Aj, A- Aj, -A+Aj, -A+Aj, A-Aj, -A+Aj, -A+Aj, -A-Aj, A+Aj, A-Aj, -A+Aj, -A-Aj, -A+Aj, A-Aj, -A-Aj, A-Aj, A+Aj, A-Aj, -A-Aj, -A+Aj, -A-Aj, -A-Aj, A+Aj, -A+Aj, -A-Aj, -A-Aj, -A+Aj, A+Aj, A+Aj, -A+Aj, A- Aj, -A-Aj |

(continued)

| Index | Polarization | Pilot sequence |
|---|---|---|
| 16 | Polarization 1 | -A+Aj, -A-Aj, A+Aj, A+Aj, -A+Aj, -A+Aj, A-Aj, A-Aj, A+Aj, A-Aj, -A+Aj, -A+Aj, -A+Aj, A+Aj, A+Aj, A-Aj, -A-Aj, A-Aj, A-Aj, A-Aj, -A+Aj, A-Aj, -A-Aj, A+Aj, A+Aj, A+Aj, A+Aj, -A+Aj, A+Aj, -A-Aj, -A+Aj, A-Aj, -A+Aj, A-Aj, A-Aj, -A+Aj, -A-Aj, A-Aj, -A-Aj, A-Aj, -A-Aj, -A-Aj, A-Aj, A+Aj, A+Aj, -A-Aj, -A-Aj, A+Aj, -A-Aj, -A-Aj, -A+Aj, A-Aj, A+Aj, -A-Aj, -A+Aj, -A-Aj, A+Aj, -A+Aj, A+Aj, A-Aj, A+Aj, -A+Aj, -A-Aj, -A+Aj, -A+Aj, A-Aj, -A-Aj, -A+Aj, -A+Aj, -A-Aj, A-Aj, A-Aj, -A-Aj, A+Aj, -A+Aj |
| | Polarization 2 | A+Aj, A-Aj, -A+Aj, -A+Aj, A+Aj, A+Aj, -A-Aj, -A-Aj, -A+Aj, -A-Aj, A+Aj, A+Aj, A+Aj, -A+Aj, -A+Aj, - A-Aj, A-Aj, -A-Aj, -A-Aj, -A-Aj, A+Aj, -A-Aj, A-Aj, -A+Aj, -A+Aj, -A+Aj, -A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, -A-Aj, -A+Aj, -A+Aj, A-Aj, A-Aj, -A+Aj, A-Aj, A-Aj, A+Aj, -A-Aj, -A+Aj, A-Aj, A+Aj, A-Aj, -A+Aj, A+Aj, -A+Aj, -A-Aj, -A+Aj, A+Aj, A-Aj, A+Aj, A+Aj, -A-Aj, A-Aj, A+Aj, A+Aj, A-Aj, -A-Aj, -A-Aj, A-Aj, -A+Aj, A+Aj |
| 17 | Polarization 1 | A-Aj, A+Aj, -A-Aj, -A-Aj, A-Aj, A-Aj, -A+Aj, -A+Aj, -A-Aj, -A+Aj, A-Aj, A-Aj, A-Aj, -A-Aj, -A-Aj, - A+Aj, A+Aj, -A+Aj, -A+Aj, -A+Aj, A-Aj, -A+Aj, A+Aj, -A-Aj, -A-Aj, -A-Aj, -A-Aj, A-Aj, -A-Aj, A+Aj, A-Aj, -A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj. -A+Aj, -A-Aj, A+Aj, A-Aj, A+Aj, -A-Aj, A-Aj, -A-Aj, -A+Aj, -A-Aj, A-Aj, A+Aj, A-Aj, A-Aj, -A+Aj, A+Aj, A-Aj, A-Aj, A+Aj, -A+Aj, -A+Aj, A+Aj, -A-Aj, A-Aj |
| | Polarization 2 | -A-Aj, -A+Aj, A-Aj, A-Aj, -A-Aj, -A-Aj, A+Aj, A+Aj, A-Aj, A+Aj, -A-Aj, -A-Aj, -A-Aj, A-Aj, A-Aj, A+Aj, -A+Aj, A+Aj, A+Aj, A+Aj, -A-Aj, A+Aj, -A+Aj, A-Aj, A-Aj, A-Aj, A-Aj, -A-Aj, A-Aj, -A+Aj, -A-Aj, A+Aj, -A-Aj, A+Aj, A+Aj, -A-Aj, -A+Aj, A+Aj, -A+Aj, A+Aj, -A+Aj, -A+Aj, A+Aj, A-Aj, A-Aj, -A+Aj, -A+Aj, A-Aj, -A+Aj, -A+Aj, -A-Aj, A+Aj, A-Aj, -A+Aj, -A-Aj, -A+Aj, A-Aj, -A-Aj, A-Aj, A+Aj, A-Aj, -A-Aj, -A+Aj, -A-Aj, -A-Aj, A+Aj, -A+Aj, -A-Aj, -A-Aj, -A+Aj, A+Aj, A+Aj, -A+Aj, A-Aj, -A-Aj |
| 18 | Polarization 1 | A-Aj, A+Aj, -A-Aj, -A-Aj, A-Aj, A-Aj, -A+Aj, -A+Aj, -A-Aj, -A+Aj, A-Aj, A-Aj, A-Aj, -A-Aj, -A-Aj, - A+Aj, A+Aj, -A+Aj, -A+Aj, -A+Aj, A-Aj, -A+Aj, A+Aj, -A-Aj, -A-Aj, -A-Aj, -A-Aj, A-Aj, -A-Aj, A+Aj, A-Aj, -A+Aj, A-Aj, -A+Aj, -A+Aj, A-Aj, A+Aj, -A+Aj, A+Aj, -A+Aj, A+Aj, A+Aj, -A+Aj, -A-Aj, -A-Aj, A+Aj, A+Aj, -A-Aj, A+Aj, A+Aj, A-Aj. -A+Aj, -A-Aj, A+Aj, A-Aj, A+Aj, -A-Aj, A-Aj, -A-Aj, -A+Aj, -A-Aj, A-Aj, A+Aj, A-Aj, A-Aj, -A+Aj, A+Aj, A-Aj, A-Aj, A+Aj, -A+Aj, -A+Aj, A+Aj, -A-Aj, A-Aj |
| | Polarization 2 | A+Aj, A-Aj, -A+Aj, -A+Aj, A+Aj, A+Aj, -A-Aj, -A-Aj, -A+Aj, -A-Aj, A+Aj, A+Aj, A+Aj, -A+Aj, -A+Aj, - A-Aj, A-Aj, -A-Aj, -A-Aj, -A-Aj, A+Aj, -A-Aj, A-Aj, -A+Aj, -A+Aj, -A+Aj, -A+Aj, A+Aj, -A+Aj, A-Aj, A+Aj, -A-Aj, A+Aj, -A-Aj, -A-Aj, A+Aj, A-Aj, -A-Aj, A-Aj, -A-Aj, A-Aj, A-Aj, -A-Aj, -A+Aj, -A+Aj, A-Aj, A-Aj, -A+Aj, A-Aj, A-Aj, A+Aj, -A-Aj, -A+Aj, A-Aj, A+Aj, A-Aj, -A+Aj, A+Aj, -A+Aj, -A-Aj, -A+Aj, A+Aj, A-Aj, A+Aj, A+Aj, -A-Aj, A-Aj, A+Aj, A+Aj, A-Aj, -A-Aj, -A-Aj, -A-Aj, A-Aj, -A+Aj, A+Aj |
| 19 | Polarization 1 | -A+Aj, -A-Aj, -A-Aj, A+Aj, A-Aj, -A+Aj, A+Aj, A-Aj, A+Aj, -A-Aj, -A+Aj, A+Aj, -A-Aj, -A+Aj, -A-Aj, - A-Aj, -A+Aj, -A+Aj, -A-Aj, -A-Aj, A+Aj, -A-Aj, A-Aj, A-Aj, -A+Aj, A-Aj, A+Aj, A+Aj, -A-Aj, A-Aj, A+Aj, A-Aj, A+Aj, -A+Aj, A-Aj, A-Aj, A-Aj, -A-Aj, A-Aj, -A-Aj, A-Aj, -A+Aj, A+Aj, A+Aj, -A-Aj, -A+Aj, A+Aj, A-Aj, A-Aj, -A+Aj, A+Aj, -A-Aj, A-Aj, A-Aj, A+Aj, -A+Aj, A-Aj, -A-Aj, -A+Aj, -A+Aj, -A+Aj, -A+Aj, - A+Aj, A+Aj, -A-Aj, -A+Aj, A-Aj, A+Aj, -A-Aj, A-Aj, -A+Aj, A+Aj, -A+Aj, A+Aj, -A-Aj |
| | Polarization 2 | -A-Aj, -A+Aj, -A+Aj, A+Aj, A-Aj, -A-Aj, -A-Aj, -A+Aj, A-Aj, -A-Aj, -A-Aj, A-Aj, -A-Aj, A+Aj, -A-Aj, - A+Aj, -A-Aj, A-Aj, A-Aj, -A-Aj, A+Aj, -A+Aj, -A-Aj, A-Aj, -A+Aj, -A-Aj, A+Aj, -A-Aj, -A-Aj, A+Aj, A+Aj, -A-Aj, -A+Aj, -A+Aj, -A+Aj, A+Aj, A-Aj, A-Aj, A+Aj, -A-Aj, -A+Aj, -A+Aj, A+Aj, -A-Aj, A+Aj, - A+Aj, A-Aj, A+Aj, A+Aj, A-Aj, -A+Aj. A-Aj, -A+Aj, A-Aj, A-Aj, -A-Aj, -A+Aj, -A-Aj, A-Aj, -A-Aj, A+Aj, A-Aj, A-Aj, -A+Aj, -A+Aj, A+Aj, A+Aj, -A+Aj, A-Aj, A-Aj, -A-Aj, A+Aj, A+Aj, A+Aj, A+Aj |

(continued)

| Index | Polarization | Pilot sequence |
|---|---|---|
| 20 | Polarization 1 | A-Aj, -A-Aj, -A+Aj, A+Aj, -A-Aj, A+Aj, A+Aj, -A+Aj, A-Aj, -A-Aj, A+Aj, A-Aj, -A-Aj, A-Aj, -A-Aj, -A-Aj, A-Aj, A-Aj, -A-Aj, -A+Aj, A-Aj, -A+Aj, -A+Aj, -A-Aj, A+Aj, -A+Aj, A+Aj, A-Aj, -A+Aj, -A+Aj, A+Aj, -A+Aj, A-Aj, A+Aj, -A+Aj, -A+Aj, -A-Aj, -A+Aj, -A-Aj, -A+Aj, -A-Aj, A+Aj, A+Aj, A-Aj, -A-Aj, A+Aj, A+Aj, -A+Aj, -A-Aj, A+Aj, A-Aj, -A+Aj, -A+Aj, -A+Aj, A-Aj, A+Aj, -A-Aj, -A-Aj, A-Aj, A-Aj, A-Aj, A-Aj, A+Aj, A-Aj, -A-Aj, A+Aj, -A+Aj, A-Aj, -A+Aj, -A-Aj, A+Aj, A-Aj, A+Aj, A-Aj, -A-Aj |
| | Polarization 2 | -A-Aj, -A+Aj, -A+Aj, A+Aj, A-Aj, -A-Aj, -A-Aj, -A+Aj, A-Aj, -A-Aj, -A-Aj, A-Aj, -A-Aj, A+Aj, -A-Aj, - A+Aj, -A-Aj, A-Aj, A-Aj, -A-Aj, A+Aj, -A+Aj, -A-Aj, A-Aj, -A+Aj, -A-Aj, A+Aj, -A-Aj, -A-Aj, A+Aj, A+Aj, -A-Aj, -A+Aj, -A+Aj, -A+Aj, A+Aj, A-Aj, A-Aj, A+Aj, -A-Aj, -A+Aj, -A+Aj, A+Aj, -A-Aj, A+Aj, - A+Aj, A-Aj, A+Aj, A+Aj, A-Aj, -A+Aj. A-Aj, -A+Aj, A-Aj, A-Aj, -A-Aj, -A+Aj, -A-Aj, A-Aj, -A-Aj, A+Aj, A-Aj, A-Aj, -A+Aj, -A+Aj, A+Aj, A+Aj, -A+Aj, A-Aj, A-Aj, -A-Aj, A+Aj, A+Aj, A+Aj, A+Aj |
| 21 | Polarization 1 | A+Aj, -A+Aj, A+Aj, A+Aj, A-Aj, -A-Aj, -A+Aj, -A-Aj, -A-Aj, A+Aj, A-Aj, -A+Aj, A+Aj, A-Aj, A+Aj, -A-Aj, -A+Aj, A+Aj, -A-Aj, -A+Aj, -A-Aj, -A-Aj, -A+Aj, -A+Aj, -A-Aj, -A-Aj, A+Aj, -A-Aj, A-Aj, A-Aj, - A+Aj, A-Aj, A+Aj, A+Aj, -A-Aj, A-Aj, A+Aj, A-Aj, A+Aj, -A+Aj, A-Aj, A-Aj, A-Aj, -A-Aj, A-Aj, -A-Aj, A-Aj, -A+Aj, A+Aj, A+Aj, -A-Aj, -A+Aj, A+Aj, A-Aj, A-Aj, -A+Aj, A+Aj, -A-Aj, A-Aj, A-Aj, A+Aj, -A+Aj, A-Aj, -A-Aj, -A+Aj, -A+Aj, -A+Aj, -A+Aj, -A+Aj, A+Aj, -A-Aj, -A+Aj, A-Aj, A+Aj, -A-Aj |
| | Polarization 2 | -A-Aj, -A+Aj, -A+Aj, A+Aj, A-Aj, -A-Aj, -A-Aj, -A+Aj, A-Aj, -A-Aj, -A-Aj, A-Aj, -A-Aj, A+Aj, -A-Aj, - A+Aj, -A-Aj, A-Aj, A-Aj, -A-Aj, A+Aj, -A+Aj, -A-Aj, A-Aj, -A+Aj, -A-Aj, A+Aj, -A-Aj, -A-Aj, A+Aj, A+Aj, -A-Aj, -A+Aj, -A+Aj, -A+Aj, A+Aj, A-Aj, A-Aj, A+Aj, -A-Aj, -A+Aj, -A+Aj, A+Aj, -A-Aj, -A+Aj. A-Aj, -A+Aj, A-Aj, A-Aj, -A-Aj, -A+Aj, -A-Aj, A-Aj, -A-Aj, A+Aj, A-Aj, A-Aj, -A+Aj, -A+Aj, A+Aj, A+Aj, -A+Aj, A-Aj, A-Aj, -A-Aj, A+Aj, A+Aj, A+Aj, A+Aj |
| 22 | Polarization 1 | -A+Aj, A+Aj, -A+Aj, A+Aj, -A-Aj, A-Aj, -A+Aj, A-Aj, A+Aj, -A-Aj, -A+Aj, A+Aj, -A+Aj, -A+Aj, -A+Aj, - A+Aj, -A-Aj, -A-Aj, A+Aj, -A+Aj, A-Aj, A-Aj, A-Aj, -A+Aj, A+Aj, -A-Aj, A-Aj, A+Aj, A+Aj, -A-Aj, - A+Aj, A+Aj, A+Aj, -A-Aj, A-Aj, -A-Aj, A-Aj, -A-Aj, A-Aj, A-Aj, A+Aj, -A+Aj, A-Aj, A+Aj, A-Aj, A-Aj, - A+Aj, A+Aj, A-Aj, A+Aj, -A-Aj, A-Aj, A-Aj, -A+Aj, A-Aj, -A-Aj, -A+Aj, -A+Aj, -A-Aj, -A-Aj, -A+Aj, -A-Aj, -A+Aj, A+Aj, -A-Aj, -A+Aj, A-Aj, A+Aj, A+Aj, -A-Aj, A+Aj, A-Aj, -A-Aj, -A+Aj, -A-Aj |
| | Polarization 2 | -A+Aj, A+Aj, A+Aj, A+Aj, A+Aj, -A-Aj, -A+Aj, -A+Aj, A-Aj, A+Aj, A+Aj, A-Aj, A-Aj, -A+Aj, -A+Aj, A+Aj, -A-Aj, -A+Aj, -A-Aj, A-Aj, -A-Aj, -A+Aj, -A+Aj, A-Aj, -A+Aj, A-Aj, -A+Aj, A+Aj, A+Aj, -A+Aj, A-Aj, A+Aj, -A-Aj, A+Aj, A-Aj, A-Aj, -A-Aj, A+Aj, -A+Aj, -A+Aj, A+Aj, A-Aj, A-Aj, A-Aj, -A-Aj, A+Aj, A+Aj, -A-Aj, -A-Aj, A+Aj, -A-Aj, A-Aj, -A+Aj, -A-Aj, A-Aj, A+Aj, -A-Aj, -A+Aj, -A+Aj, -A-Aj, A-Aj, -A-Aj, A+Aj, -A-Aj, -A+Aj, -A-Aj, -A-Aj, -A+Aj, A-Aj, -A-Aj, -A-Aj, -A+Aj, A+Aj, A-Aj, A-Aj |
| 23 | Polarization 1 | A-Aj, -A-Aj, -A+Aj, A+Aj, -A+Aj, A+Aj, -A-Aj, A-Aj, -A+Aj, A-Aj, A+Aj, -A-Aj, -A+Aj, A+Aj, -A+Aj, - A+Aj, -A+Aj, -A+Aj, -A-Aj, -A-Aj, A+Aj, -A+Aj, A-Aj, A-Aj, A-Aj, -A+Aj, A+Aj, -A-Aj, A-Aj, A+Aj, A+Aj, -A-Aj, -A+Aj, A+Aj, A+Aj, -A-Aj, A-Aj, -A-Aj, A-Aj, -A-Aj, A-Aj, A-Aj, A+Aj, -A+Aj, A-Aj, A+Aj, A-Aj, A-Aj, -A+Aj, A+Aj, A-Aj, A+Aj, -A-Aj, A-Aj, A-Aj, -A+Aj, A-Aj, -A-Aj, -A+Aj, -A+Aj, -A-Aj, -A-Aj, -A+Aj, -A-Aj, -A+Aj, A+Aj, -A-Aj, -A+Aj, A-Aj, A+Aj, A+Aj, -A-Aj, A+Aj, A-Aj, -A-Aj |
| | Polarization 2 | -A+Aj, A+Aj, A+Aj, A+Aj, A+Aj, -A-Aj, -A+Aj, -A+Aj, A-Aj, A+Aj, A+Aj, A-Aj, A-Aj, -A+Aj, -A+Aj, A+Aj, -A-Aj, -A+Aj, -A-Aj, A-Aj, -A-Aj, -A+Aj, -A+Aj, A-Aj, -A+Aj, A-Aj, -A+Aj, A+Aj, A+Aj, -A+Aj, A-Aj, A+Aj, -A-Aj, A+Aj, -A-Aj, A+Aj, A-Aj, A-Aj, -A-Aj, A+Aj, -A+Aj, -A+Aj, A+Aj, A-Aj, A-Aj, A-Aj, -A-Aj, A+Aj, A+Aj, -A-Aj, -A-Aj, A+Aj, -A-Aj, A-Aj, -A+Aj, -A-Aj, A-Aj, A+Aj, -A-Aj, -A+Aj, -A+Aj, -A-Aj, A-Aj, -A-Aj, A+Aj, -A-Aj, -A+Aj, -A-Aj, -A-Aj, -A+Aj, A-Aj, -A-Aj, -A-Aj, -A+Aj, A+Aj, A-Aj, A-Aj |

(continued)

| Index | Polarization | Pilot sequence |
|---|---|---|
| 24 | Polarization 1 | A-Aj, A-Aj, A+Aj, A+Aj, -A-Aj, -A+Aj, A+Aj, -A-Aj, -A-Aj, A-Aj, -A+Aj, A-Aj, A+Aj, -A+Aj, A-Aj, - A+Aj, -A+Aj, A+Aj, A-Aj, A+Aj, -A+Aj, A+Aj, A-Aj, -A+Aj, -A-Aj, A-Aj, A+Aj, -A+Aj, -A-Aj, A+Aj, A-Aj, A+Aj, -A-Aj, A+Aj, -A-Aj, A+Aj, A-Aj, A-Aj, A+Aj, A+Aj, A+Aj, A+Aj, A-Aj, A-Aj, -A-Aj, A-Aj, -A-Aj, -A-Aj, -A-Aj, A-Aj, -A+Aj, -A+Aj, -A+Aj, -A-Aj, -A-Aj, -A+Aj, -A+Aj, A-Aj, -A-Aj, -A-Aj, A-Aj, -A-Aj, A-Aj, -A+Aj, A+Aj, -A-Aj, -A+Aj, -A+Aj, -A+Aj, -A+Aj, A+Aj, -A+Aj, A-Aj, A-Aj, -A-Aj |
| | Polarization 2 | A-Aj, -A+Aj, -A+Aj, -A-Aj, -A-Aj, A-Aj, A+Aj, A+Aj, A-Aj, -A-Aj, A-Aj, -A+Aj, -A-Aj, A-Aj, -A-Aj, A+Aj, -A+Aj, -A+Aj, A-Aj, A+Aj, -A+Aj, -A+Aj, A+Aj, -A-Aj, -A+Aj, A-Aj, A+Aj, -A-Aj, -A+Aj, -A+Aj, A-Aj, A+Aj, A-Aj, A+Aj, A-Aj, A-Aj, -A+Aj, A-Aj, A-Aj, A-Aj, A-Aj, A-Aj, -A+Aj, A+Aj, A-Aj, -A-Aj, -A-Aj, -A-Aj, -A+Aj, A+Aj, -A-Aj, A+Aj, -A-Aj, -A-Aj, -A-Aj, A+Aj, -A+Aj, A+Aj, A+Aj, A-Aj, -A-Aj, -A+Aj, A+Aj, -A+Aj, -A-Aj, -A-Aj, A+Aj, -A-Aj, A+Aj, -A+Aj, -A-Aj, A-Aj, -A+Aj, A+Aj, A+Aj |
| 25 | Polarization 1 | A+Aj, -A-Aj, A-Aj, A-Aj, A+Aj, A+Aj, -A-Aj, -A+Aj, A+Aj, -A-Aj, -A-Aj, A-Aj, -A+Aj, A-Aj, A+Aj, - A+Aj, A-Aj, -A+Aj, -A+Aj, A+Aj, A-Aj, A+Aj, -A+Aj, A+Aj, A-Aj, -A+Aj, -A-Aj, A-Aj, A+Aj, -A+Aj, -A-Aj, A+Aj, A-Aj, A+Aj, -A-Aj, A+Aj, -A-Aj, A+Aj, A-Aj, A-Aj, A+Aj, A+Aj, A+Aj, A+Aj, A-Aj, A-Aj, -A-Aj, -A-Aj, -A-Aj, -A-Aj, -A-Aj, A-Aj, -A+Aj, -A+Aj, -A+Aj, -A-Aj, -A-Aj, -A+Aj, -A+Aj, A-Aj, -A-Aj, -A-Aj, A-Aj, -A-Aj, A-Aj, -A+Aj, A+Aj, -A-Aj, -A+Aj, -A+Aj, -A+Aj, -A+Aj, A+Aj, -A+Aj, A-Aj |
| | Polarization 2 | A-Aj, -A+Aj, -A+Aj, -A-Aj, -A-Aj, A-Aj, A+Aj, A+Aj, A-Aj, -A-Aj, A-Aj, -A+Aj, -A-Aj, A-Aj, -A-Aj, A+Aj, -A+Aj, -A+Aj, A-Aj, A+Aj, -A+Aj, -A+Aj, A+Aj, -A-Aj, -A+Aj, A-Aj, A+Aj, -A-Aj, -A+Aj, -A+Aj, A-Aj, A+Aj, A-Aj, A-Aj, -A+Aj, A-Aj, A-Aj, A-Aj, A-Aj, A-Aj, -A+Aj, A+Aj, A-Aj, -A-Aj, -A-Aj, -A-Aj, -A+Aj, A+Aj, -A-Aj, A+Aj, -A-Aj, -A-Aj, -A-Aj, A+Aj, -A+Aj, A+Aj, A+Aj, A-Aj, -A-Aj, -A+Aj, A+Aj, -A+Aj, -A-Aj, -A-Aj, A+Aj, -A-Aj, A+Aj, -A+Aj, -A-Aj, A-Aj, -A+Aj, A+Aj, A+Aj |
| 26 | Polarization 1 | A+Aj, -A-Aj, A+Aj, A+Aj, A-Aj, -A+Aj, -A+Aj, -A+Aj, A+Aj, A-Aj, -A-Aj, A+Aj, A-Aj, -A-Aj, -A+Aj, -A-Aj, A+Aj, -A+Aj, A-Aj, A+Aj, -A-Aj, A-Aj, A+Aj, A+Aj, -A+Aj, A-Aj, A+Aj, A+Aj, -A-Aj, A-Aj, -A+Aj, - A+Aj, A-Aj, A-Aj, -A+Aj, A+Aj, -A+Aj, A-Aj, -A+Aj, A-Aj, -A+Aj, A+Aj, -A+Aj, -A+Aj, A+Aj, A+Aj, A+Aj, A+Aj, -A+Aj, -A-Aj, -A+Aj, -A-Aj, -A-Aj, -A-Aj, -A+Aj, -A-Aj, A-Aj, A-Aj, A-Aj, -A-Aj, -A-Aj, A-Aj, A+Aj, -A-Aj, -A-Aj, -A+Aj, -A-Aj, -A+Aj, -A-Aj, A+Aj, A-Aj, -A-Aj, A-Aj, A-Aj, A-Aj |
| | Polarization 2 | A-Aj, -A+Aj, -A+Aj, -A-Aj, -A-Aj, A-Aj, A+Aj, A+Aj, A-Aj, -A-Aj, A-Aj, -A+Aj, -A-Aj, A-Aj, -A-Aj, A+Aj, -A+Aj, -A+Aj, A-Aj, A+Aj, -A+Aj, -A+Aj, A+Aj, -A-Aj, -A+Aj, A-Aj, A+Aj, -A-Aj, -A+Aj, -A+Aj, A-Aj, A+Aj, A-Aj, A-Aj, -A+Aj, A-Aj, A-Aj, A-Aj, A-Aj, A-Aj, -A+Aj, A+Aj, A-Aj, -A-Aj, -A-Aj, -A-Aj, -A+Aj, A+Aj, -A-Aj, A+Aj, -A-Aj, -A-Aj, -A-Aj, A+Aj, -A+Aj, A+Aj, A+Aj, A-Aj, -A-Aj, -A+Aj, A+Aj, -A+Aj, -A-Aj, -A-Aj, A+Aj, -A-Aj, A+Aj, -A+Aj, -A-Aj, A-Aj, -A+Aj, A+Aj, A+Aj |
| 27 | Polarization 1 | -A+Aj, -A+Aj, A-Aj, A+Aj, A-Aj, A-Aj, A-Aj, A-Aj, -A-Aj, A+Aj, A-Aj, -A+Aj, -A-Aj, -A+Aj, -A-Aj, -A-Aj, -A+Aj, A-Aj, A-Aj, -A-Aj, -A-Aj, A-Aj, A-Aj, A-Aj, -A+Aj, -A-Aj, -A-Aj, -A-Aj, -A+Aj, -A-Aj, -A+Aj, - A+Aj, A+Aj, A+Aj, A+Aj, A+Aj, -A+Aj, -A+Aj, A+Aj, -A-Aj, A+Aj, -A-Aj, A+Aj, -A+Aj, A+Aj, -A-Aj, A-Aj, A+Aj, -A+Aj, -A-Aj, A-Aj, -A+Aj, A+Aj, A-Aj, A+Aj, -A+Aj, A-Aj, -A-Aj, - A+Aj, A-Aj, -A+Aj, -A-Aj, -A-Aj, A+Aj, A-Aj, -A-Aj, A+Aj, A+Aj, -A+Aj, -A+Aj, -A-Aj |
| | Polarization 2 | A+Aj, A+Aj, A+Aj, A-Aj, -A+Aj, -A-Aj, A-Aj, A+Aj, -A-Aj, A+Aj, -A-Aj, -A-Aj, A-Aj, A+Aj, A-Aj, -A-Aj, -A+Aj, A+Aj, A+Aj, A-Aj, A+Aj, -A-Aj, -A-Aj, -A-Aj, A+Aj, -A-Aj, A+Aj, A-Aj, -A-Aj, -A-Aj, - A+Aj, A+Aj, A-Aj, -A+Aj, -A+Aj, A+Aj, -A+Aj, -A+Aj, A-Aj, -A+Aj, -A+Aj, A+Aj, -A+Aj, A+Aj, -A+Aj, A-Aj, A-Aj, -A-Aj, A+Aj, -A+Aj, A-Aj, A-Aj, A+Aj, -A+Aj, A-Aj, A-Aj, A+Aj, -A-Aj, A-Aj, A-Aj, A+Aj, -A-Aj, -A+Aj, -A-Aj, A-Aj, -A+Aj, -A-Aj, -A+Aj, A+Aj, A+Aj, -A+Aj, -A-Aj, -A-Aj, A-Aj, A-Aj |

(20) When $N_{PS} = 80$, if a remainder of $N_{TS}$ divided by 4 is 1, the pilot sequence is one item in Table 27-1. If a remainder of $N_{TS}$ divided by 4 is 3, the pilot sequence is one item in Table 27-1 or Table 27-2. Alternatively, any item is selected from Table 27-3 as a pilot sequence in one polarization direction, and any item is selected from Table 27-4 as a pilot sequence in the other polarization direction. Alternatively, any item is selected from Table 27-5 as a pilot sequence in one polarization direction, and any item is selected from Table 27-6 as a pilot sequence in the other polarization direction.

**Table 27-1**

| Index | Polarization | Pilot sequence |
|---|---|---|
| 1 | Polarization 1 | -A-Aj, -A+Aj, A+Aj, -A+Aj, -A+Aj, -A+Aj, -A-Aj, -A-Aj, A+Aj, -A-Aj, A+Aj, -A+Aj, -A+Aj, A+Aj, -A+Aj, A+Aj, -A-Aj, A+Aj, A+Aj, -A-Aj, -A-Aj, A-Aj, -A-Aj, -A-Aj, A-Aj, A-Aj, -A+Aj, - A+Aj, -A+Aj, A-Aj, -A+Aj, -A-Aj, A+Aj, -A-Aj, -A+Aj, -A-Aj, A-Aj, -A-Aj, A-Aj, A+Aj, -A+Aj, A-Aj, A-Aj, -A+Aj, A+Aj, -A-Aj, -A+Aj, A-Aj, A+Aj, A+Aj, -A+Aj, -A-Aj, -A+Aj, A+Aj, A+Aj, - A-Aj, A-Aj, A+Aj, A+Aj, A+Aj, -A+Aj, A-Aj, -A-Aj, -A-Aj, -A-Aj, A+Aj, A-Aj, A-Aj, A-Aj, A-Aj, -A-Aj, -A+Aj, A-Aj, -A+Aj, A-Aj, A-Aj, A+Aj, A-Aj, A+Aj, A-Aj |
| | Polarization 2 | -A+Aj, -A-Aj, A-Aj, -A-Aj, -A-Aj, -A-Aj, -A+Aj, -A+Aj, A-Aj, -A+Aj, A-Aj, -A-Aj, -A-Aj, A-Aj, - A-Aj, A-Aj, -A+Aj, A-Aj, A-Aj, -A+Aj, -A+Aj, A+Aj, -A+Aj, -A+Aj, A+Aj, A+Aj, -A-Aj, -A-Aj, - A-Aj, A+Aj, -A-Aj, -A+Aj, A-Aj, -A+Aj, -A-Aj, -A+Aj, A+Aj, -A+Aj, A+Aj, A-Aj, -A-Aj, A+Aj, A+Aj, -A-Aj, A-Aj, -A+Aj, -A-Aj, A+Aj, A-Aj, A-Aj, -A-Aj, -A+Aj, -A-Aj, A-Aj, A-Aj, -A+Aj, A+Aj, A-Aj, A-Aj, A-Aj, -A-Aj, A+Aj, -A+Aj, -A+Aj, -A+Aj, A-Aj, A+Aj, A+Aj, A+Aj, A+Aj, - A+Aj, -A-Aj, A+Aj, -A-Aj, A+Aj, A+Aj, A-Aj, A+Aj, A-Aj, A+Aj |
| 2 | Polarization 1 | -A-Aj, -A+Aj, A+Aj, -A+Aj, -A+Aj, -A+Aj, -A-Aj, -A-Aj, A+Aj, -A-Aj, A+Aj, -A+Aj, -A+Aj, A+Aj, -A+Aj, A+Aj, -A-Aj, A+Aj, A+Aj, -A-Aj, -A-Aj, A-Aj, -A-Aj, -A-Aj, A-Aj, A-Aj, -A+Aj, - A+Aj, -A+Aj, A-Aj, -A+Aj, -A-Aj, A+Aj, -A-Aj, -A+Aj, -A-Aj, A-Aj, -A-Aj, A-Aj, A+Aj, -A+Aj, A-Aj, A-Aj, -A+Aj, A+Aj, -A-Aj, -A+Aj, A-Aj, A+Aj, A+Aj, -A+Aj, -A-Aj, -A+Aj, A+Aj, A+Aj, - A-Aj, A-Aj, A+Aj, A+Aj, A+Aj, -A+Aj, A-Aj, -A-Aj, -A-Aj, -A-Aj, A+Aj, A-Aj, A-Aj, A-Aj, A-Aj, -A-Aj, -A+Aj, A-Aj, -A+Aj, A-Aj, A-Aj, A+Aj, A-Aj, A+Aj, A-Aj |
| | Polarization 2 | A-Aj, A+Aj, -A+Aj, A+Aj, A+Aj, A+Aj, A-Aj, A-Aj, -A+Aj, A-Aj, -A+Aj, A+Aj, A+Aj, -A+Aj, A+Aj, -A+Aj, A-Aj, -A+Aj, -A+Aj, A-Aj, A-Aj, -A-Aj, A-Aj, A-Aj, -A-Aj, -A-Aj, A+Aj, A+Aj, A+Aj, -A-Aj, A+Aj, A-Aj, -A+Aj, A-Aj, A+Aj, A-Aj, -A-Aj, A-Aj, -A-Aj, -A+Aj, A+Aj, -A-Aj, -A-Aj, A+Aj, -A+Aj, A-Aj, A+Aj, -A-Aj, -A+Aj, -A+Aj, A+Aj, A-Aj, A+Aj, -A+Aj, -A+Aj, A-Aj, -A-Aj, -A+Aj, -A+Aj, -A+Aj, A+Aj, -A-Aj, A-Aj, A-Aj, A-Aj, -A+Aj, -A-Aj, -A-Aj, -A-Aj, -A-Aj, A-Aj, A+Aj, -A-Aj, A+Aj, -A-Aj, -A+Aj, -A-Aj, -A+Aj, -A-Aj |
| 3 | Polarization 1 | -A+Aj, -A-Aj, A-Aj, -A-Aj, -A-Aj, -A-Aj, -A+Aj, -A+Aj, A-Aj, -A+Aj, A-Aj, -A-Aj, -A-Aj, A-Aj, - A-Aj, A-Aj, -A+Aj, A-Aj, A-Aj, -A+Aj, -A+Aj, A+Aj, -A+Aj, -A+Aj, A+Aj, A+Aj, -A-Aj, -A-Aj, - A-Aj, A+Aj, -A-Aj, -A+Aj, A-Aj, -A+Aj, -A-Aj, -A+Aj, A+Aj, -A+Aj, A+Aj, A-Aj, -A-Aj, A+Aj, A+Aj, -A-Aj, A-Aj, -A+Aj, -A-Aj, A+Aj, A-Aj, A-Aj, -A-Aj, -A+Aj, -A-Aj, A-Aj, A-Aj, -A-Aj, A+Aj, -A+Aj, -A+Aj, -A+Aj, A-Aj, A+Aj, A+Aj, A+Aj, A+Aj, -A+Aj, -A-Aj, A+Aj, -A-Aj, A+Aj, A+Aj, A-Aj, A+Aj, A-Aj, A+Aj |
| | Polarization 2 | A+Aj, A-Aj, -A-Aj, A-Aj, A-Aj, A-Aj, A+Aj, A+Aj, -A-Aj, A+Aj, -A-Aj, A-Aj, A-Aj, -A-Aj, A-Aj, -A-Aj, A+Aj, -A-Aj, -A-Aj, A+Aj, A+Aj, -A+Aj, A+Aj, A+Aj, -A+Aj, -A+Aj, A-Aj, A-Aj, A-Aj, - A+Aj, A-Aj, A+Aj, -A-Aj, A+Aj, A-Aj, A+Aj, -A+Aj, A+Aj, -A+Aj, -A-Aj, A-Aj, -A+Aj, -A+Aj, A-Aj, -A-Aj, A+Aj, A-Aj, -A+Aj, -A-Aj, -A-Aj, A-Aj, A+Aj, A-Aj, -A-Aj, -A-Aj, A+Aj, -A+Aj, - A-Aj, -A-Aj, -A-Aj, A-Aj, -A+Aj, A+Aj, A+Aj, A+Aj, -A-Aj, -A+Aj, -A+Aj, -A+Aj, -A+Aj, A+Aj, A-Aj, -A+Aj, A-Aj, -A+Aj, -A+Aj, -A-Aj, -A+Aj, -A-Aj, -A+Aj |
| 4 | Polarization 1 | A-Aj, A+Aj, -A+Aj, A+Aj, A+Aj, A+Aj, A-Aj, A-Aj, -A+Aj, A-Aj, -A+Aj, A+Aj, A+Aj, -A+Aj, A+Aj, -A+Aj, A-Aj, -A+Aj, -A+Aj, A-Aj, A-Aj, -A-Aj, A-Aj, A-Aj, -A-Aj, -A-Aj, A+Aj, A+Aj, A+Aj, -A-Aj, A+Aj, A-Aj, -A+Aj, A-Aj, A+Aj, A-Aj, -A-Aj, A-Aj, -A-Aj, -A+Aj, A+Aj, -A-Aj, -A-Aj, A+Aj, -A+Aj, A-Aj, A+Aj, A-Aj, A+Aj, -A+Aj, -A+Aj, A-Aj, -A-Aj, -A+Aj, -A+Aj, -A+Aj, A+Aj, -A-Aj, A-Aj, A-Aj, A-Aj, -A+Aj, -A-Aj, -A-Aj, -A-Aj, -A-Aj, A-Aj, A+Aj, -A-Aj, A+Aj, -A-Aj, -A-Aj, -A+Aj, -A-Aj, -A+Aj, -A-Aj |
| | Polarization 2 | A+Aj, A-Aj, -A-Aj, A-Aj, A-Aj, A-Aj, A+Aj, A+Aj, -A-Aj, A+Aj, -A-Aj, A-Aj, A-Aj, -A-Aj, A-Aj, -A-Aj, A+Aj, -A-Aj, -A-Aj, A+Aj, A+Aj, -A+Aj, A+Aj, A+Aj, -A+Aj, -A+Aj, A-Aj, A-Aj, A-Aj, - A+Aj, A-Aj, A+Aj, -A-Aj, A+Aj, A-Aj, A+Aj, -A+Aj, A+Aj, -A+Aj, -A-Aj, A-Aj, -A+Aj, -A+Aj, A-Aj, -A-Aj, A+Aj, A-Aj, -A+Aj, -A-Aj, -A-Aj, A-Aj, A+Aj, A-Aj, -A-Aj, -A-Aj, A+Aj, -A+Aj, - A-Aj, -A-Aj, -A-Aj, A-Aj, -A+Aj, A+Aj, A+Aj, A+Aj, -A-Aj, -A+Aj, -A+Aj, -A+Aj, -A+Aj, A+Aj, A-Aj, -A+Aj, A-Aj, -A+Aj, -A+Aj, -A-Aj, -A+Aj, -A-Aj, -A+Aj |

(continued)

| Index | Polarization | Pilot sequence |
|---|---|---|
| 5 | Polarization 1 | -A-Aj, A-Aj, -A-Aj, A-Aj, -A-Aj, -A-Aj, A+Aj, -A-Aj, A+Aj, -A+Aj, -A-Aj, -A-Aj, -A-Aj, -A-Aj, A-Aj, -A+Aj, -A+Aj, -A+Aj, -A-Aj, A+Aj, A-Aj, A-Aj, A-Aj, -A-Aj, -A+Aj, A-Aj, A-Aj, A+Aj, - A+Aj, A+Aj, A-Aj, A-Aj, -A-Aj, A+Aj, -A+Aj, A-Aj, A+Aj, -A-Aj, -A-Aj, A+Aj, A-Aj, -A-Aj, - A+Aj, -A-Aj, -A+Aj, A+Aj, -A+Aj, A-Aj, -A+Aj, A+Aj, -A-Aj, A+Aj, A+Aj, A+Aj, -A-Aj, -A-Aj, - A+Aj, -A+Aj, -A-Aj, -A+Aj, -A+Aj, A-Aj, A-Aj, -A+Aj, A-Aj, A+Aj, A-Aj, A+Aj, A+Aj, A-Aj, - A+Aj, A-Aj, -A+Aj, -A+Aj, A+Aj, A+Aj, A+Aj, A-Aj, A+Aj, -A+Aj |
| | Polarization 2 | -A+Aj, A+Aj, -A+Aj, A+Aj, -A+Aj, -A+Aj, A-Aj, -A+Aj, A-Aj, -A-Aj, -A+Aj, -A+Aj, -A+Aj, - A+Aj, A+Aj, -A-Aj, -A-Aj, -A-Aj, -A+Aj, A-Aj, A+Aj, A+Aj, A+Aj, -A+Aj, -A-Aj, A+Aj, A+Aj, A-Aj, -A-Aj, A-Aj, A+Aj, A+Aj, -A+Aj, A-Aj, -A-Aj, A+Aj, A-Aj, -A+Aj, -A+Aj, A-Aj, A+Aj, - A+Aj, -A-Aj, -A+Aj, -A-Aj, A-Aj, -A-Aj, A+Aj, -A-Aj, A-Aj, -A+Aj, A-Aj, A-Aj, A-Aj, -A+Aj, - A+Aj, -A- Aj, -A-Aj, -A+Aj, -A-Aj, -A-Aj, A+Aj, A+Aj, -A-Aj, A+Aj, A-Aj, A+Aj, A-Aj, A-Aj, A+Aj, -A-Aj, A+Aj, -A-Aj, -A-Aj, A-Aj, A-Aj, A-Aj, A+Aj, A-Aj, -A-Aj |
| 6 | Polarization 1 | -A-Aj, A-Aj, -A-Aj, A-Aj, -A-Aj, -A-Aj, A+Aj, -A-Aj, A+Aj, -A+Aj, -A-Aj, -A-Aj, -A-Aj, -A-Aj, A-Aj, -A+Aj, -A+Aj, -A+Aj, -A-Aj, A+Aj, A-Aj, A-Aj, A-Aj, -A-Aj, -A+Aj, A-Aj, A-Aj, A+Aj, - A+Aj, A+Aj, A-Aj, A-Aj, -A-Aj, A+Aj, -A+Aj, A-Aj, A+Aj, -A-Aj, -A-Aj, A+Aj, A-Aj, -A-Aj, - A+Aj, -A- Aj, -A+Aj, A+Aj, -A+Aj, A-Aj, -A+Aj, A+Aj, -A-Aj, A+Aj, A+Aj, A+Aj, -A-Aj, -A-Aj, - A+Aj, -A+Aj, -A-Aj, -A+Aj, -A+Aj, A-Aj, A-Aj, -A+Aj, A-Aj, A+Aj, A-Aj, A+Aj, A+Aj, A-Aj, - A+Aj, A- Aj, -A+Aj, -A+Aj, A+Aj, A+Aj, A+Aj, A-Aj, A+Aj, -A+Aj |
| | Polarization 2 | A-Aj, -A-Aj, A-Aj, -A-Aj, A-Aj, A-Aj, -A+Aj, A-Aj, -A+Aj, A+Aj, A-Aj, A-Aj, A-Aj, A-Aj, -A-Aj, A+Aj, A+Aj, A+Aj, A-Aj, -A+Aj, -A-Aj, -A-Aj, -A-Aj, A-Aj, A+Aj, -A-Aj, -A-Aj, -A+Aj, A+Aj, - A+Aj, -A-Aj, -A-Aj, A-Aj, -A+Aj, A+Aj, -A-Aj, -A+Aj, A-Aj, A-Aj, -A+Aj, -A-Aj, A-Aj, A+Aj, A-Aj, A+Aj, -A+Aj, A+Aj, -A-Aj, A+Aj, -A+Aj, A-Aj, -A+Aj, -A+Aj, -A+Aj, A-Aj, A-Aj, A+Aj, A+Aj, A-Aj, A+Aj, A+Aj, -A-Aj, -A-Aj, A+Aj, -A-Aj, -A+Aj, -A-Aj, -A+Aj, -A+Aj, -A-Aj, A+Aj, -A-Aj, A+Aj, A+Aj, -A+Aj, -A+Aj, -A+Aj, -A-Aj, -A+Aj, A+Aj |
| 7 | Polarization 1 | -A+Aj, A+Aj, -A+Aj, A+Aj, -A+Aj, -A+Aj, A-Aj, -A+Aj, A-Aj, -A-Aj, -A+Aj, -A+Aj, -A+Aj, - A+Aj, A+Aj, -A-Aj, -A-Aj, -A-Aj, -A+Aj, A-Aj, A+Aj, A+Aj, A+Aj, -A+Aj, -A-Aj, A+Aj, A+Aj, A-Aj, -A-Aj, A-Aj, A+Aj, A+Aj, -A+Aj, A-Aj, -A-Aj, A+Aj, A-Aj, -A+Aj, -A+Aj, A-Aj, A+Aj, - A+Aj, -A-Aj, -A+Aj, -A-Aj, A-Aj, -A-Aj, A+Aj, -A-Aj, A-Aj, -A+Aj, A-Aj, A-Aj, A-Aj, -A+Aj, - A+Aj, -A- Aj, -A-Aj, -A+Aj, -A-Aj, -A-Aj, A+Aj, A+Aj, -A-Aj, A+Aj, A-Aj, A+Aj, A-Aj, A-Aj, A+Aj, -A-Aj, A+Aj, -A-Aj, -A-Aj, A-Aj, A-Aj, A-Aj, A+Aj, A-Aj, -A-Aj |
| | Polarization 2 | A+Aj, -A+Aj, A+Aj, -A+Aj, A+Aj. A+Aj, -A-Aj, A+Aj, -A-Aj, A-Aj, A+Aj, A+Aj, A+Aj, A+Aj, - A+Aj, A-Aj, A-Aj, A-Aj, A+Aj, -A-Aj, -A+Aj, -A+Aj, -A+Aj, A+Aj, A-Aj, -A+Aj, -A+Aj, -A-Aj, A-Aj, -A-Aj, -A+Aj, -A+Aj, A+Aj. -A-Aj, A-Aj, -A+Aj, -A-Aj, A+Aj, A+Aj, -A-Aj, -A+Aj, A+Aj, A-Aj, A+Aj, A-Aj, -A-Aj, A-Aj, -A+Aj, A-Aj, -A-Aj, A+Aj, -A-Aj, -A-Aj, -A-Aj, A+Aj, A+Aj, A-Aj, A-Aj, A+Aj, A-Aj, A-Aj, -A+Aj, -A+Aj, A-Aj, -A+Aj, -A-Aj, -A+Aj, -A-Aj, -A-Aj, -A+Aj, A-Aj, -A+Aj, A-Aj, A-Aj, -A-Aj, -A-Aj, -A-Aj, -A+Aj, -A-Aj, A-Aj |
| 8 | Polarization 1 | A-Aj, -A-Aj, A-Aj, -A-Aj, A-Aj, A-Aj, -A+Aj, A-Aj, -A+Aj, A+Aj, A-Aj, A-Aj, A-Aj, A-Aj, -A-Aj, A+Aj, A+Aj, A+Aj, A-Aj, -A+Aj, -A-Aj, -A-Aj, -A-Aj, A-Aj, A+Aj, -A-Aj, -A-Aj, -A+Aj, A+Aj, - A+Aj, -A-Aj, -A-Aj, A-Aj, -A+Aj, A+Aj, -A-Aj, -A+Aj, A-Aj, A-Aj, -A+Aj, -A-Aj, A-Aj, A+Aj, A-Aj, A+Aj, -A+Aj, A+Aj, -A-Aj, A+Aj, -A+Aj, A-Aj, -A+Aj, -A+Aj, -A+Aj, A-Aj, A-Aj, A+Aj, A+Aj, A-Aj, A+Aj, A+Aj, -A-Aj, -A-Aj, A+Aj, -A-Aj, -A+Aj, -A-Aj, -A+Aj, -A+Aj, -A-Aj, A+Aj, -A-Aj, A+Aj, A+Aj, -A+Aj, -A+Aj, -A+Aj, -A-Aj, -A+Aj, A+Aj |
| | Polarization 2 | A+Aj, -A+Aj, A+Aj, -A+Aj, A+Aj. A+Aj, -A-Aj, A+Aj, -A-Aj, A-Aj, A+Aj, A+Aj, A+Aj, A+Aj, - A+Aj, A-Aj, A-Aj, A-Aj, A+Aj, -A-Aj, -A+Aj, -A+Aj, -A+Aj, A+Aj, A-Aj, -A+Aj, -A+Aj, -A-Aj, A-Aj, -A-Aj, -A+Aj, -A+Aj, A+Aj. -A-Aj, A-Aj, -A+Aj, -A-Aj, A+Aj, A+Aj, -A-Aj, -A+Aj, A+Aj, A-Aj, A+Aj, A-Aj, -A-Aj, A-Aj, -A+Aj, A-Aj, -A-Aj, A+Aj, -A-Aj, -A-Aj, -A-Aj, A+Aj, A+Aj, A-Aj, A-Aj, A+Aj, A-Aj, A-Aj, -A+Aj, -A+Aj, A-Aj, -A+Aj, -A-Aj, -A+Aj, -A-Aj, -A-Aj, -A+Aj, A-Aj, -A+Aj, A-Aj, A-Aj, -A-Aj, -A-Aj, -A-Aj, -A+Aj, -A-Aj, A-Aj |

(continued)

| Index | Polarization | Pilot sequence |
|---|---|---|
| 9 | Polarization 1 | -A-Aj, A+Aj, A+Aj, A-Aj, -A+Aj, -A+Aj, -A+Aj, A+Aj, A-Aj, -A-Aj, A+Aj, A-Aj, -A-Aj, -A+Aj, -A-Aj, A+Aj, -A+Aj, A-Aj, A+Aj, -A-Aj, A-Aj, A+Aj, A+Aj, -A+Aj, A-Aj, A+Aj, A+Aj, -A-Aj, A-Aj, -A+Aj, -A+Aj, A-Aj, A-Aj, -A+Aj, A+Aj, -A+Aj, A-Aj, -A+Aj, A-Aj, -A+Aj, A+Aj, -A+Aj, - A+Aj, A+Aj, A+Aj, A+Aj, A+Aj, -A+Aj, -A-Aj, -A+Aj, -A-Aj, -A-Aj, -A-Aj, -A+Aj, -A-Aj, A-Aj, A-Aj, A-Aj, -A-Aj, -A-Aj, A-Aj, A+Aj, -A-Aj, -A-Aj, -A+Aj, -A-Aj, -A+Aj, -A-Aj, A+Aj, A-Aj, - A-Aj, A-Aj, A-Aj, A-Aj, A+Aj, A-Aj, A+Aj, -A+Aj, -A-Aj, -A-Aj |
| | Polarization 2 | -A+Aj, A+Aj, -A+Aj, A+Aj, -A+Aj, -A-Aj, A+Aj, -A+Aj, -A+Aj, -A+Aj, -A+Aj, -A-Aj, A+Aj, A+Aj, -A-Aj, -A-Aj, -A-Aj, -A-Aj, A+Aj, A-Aj, -A+Aj, A-Aj, -A-Aj, -A-Aj, -A+Aj, A-Aj, A+Aj, A+Aj, A+Aj, -A-Aj, -A-Aj, A+Aj, A-Aj, A-Aj, -A-Aj, -A+Aj, A-Aj, -A+Aj, A-Aj, A-Aj, -A+Aj, -A-Aj, A+Aj, A+Aj, A+Aj, A-Aj, -A+Aj, A-Aj, A+Aj, A-Aj, -A-Aj, -A-Aj, A+Aj, A+Aj, A-Aj, A-Aj, A+Aj, -A-Aj, -A+Aj, A-Aj, -A-Aj, A-Aj, -A-Aj, A+Aj, A-Aj, A+Aj, A+Aj, -A+Aj, -A+Aj, -A+Aj, A-Aj, A-Aj, A-Aj, -A+Aj, -A-Aj, -A-Aj, -A+Aj, A-Aj, -A-Aj, -A+Aj |
| 10 | Polarization 1 | -A+Aj, A+Aj, -A+Aj, A+Aj, -A+Aj, -A-Aj, A+Aj, -A+Aj, -A+Aj, -A+Aj, -A+Aj, -A-Aj, A+Aj, A+Aj, -A-Aj, -A-Aj, -A-Aj, -A-Aj, A+Aj, A-Aj, -A+Aj, A-Aj, -A-Aj, -A-Aj, -A+Aj, A-Aj, A+Aj, A+Aj, A+Aj, -A-Aj, -A-Aj, A+Aj, A-Aj, A-Aj, -A-Aj, -A+Aj, A-Aj, -A+Aj, A-Aj, A-Aj, -A+Aj, -A-Aj, A+Aj, A+Aj, A+Aj, A+Aj, A-Aj, -A+Aj, A-Aj, A+Aj, A-Aj, -A-Aj, -A-Aj, A+Aj, A+Aj, A-Aj, A-Aj, A+Aj, -A-Aj, -A+Aj, A-Aj, -A-Aj, A-Aj, -A-Aj, A+Aj, A-Aj, A+Aj, A+Aj, -A+Aj, -A+Aj, -A+Aj, A-Aj, A-Aj, A-Aj, -A+Aj, -A-Aj, -A-Aj, -A+Aj, A-Aj, -A-Aj, -A+Aj |
| | Polarization 2 | -A+Aj, A+Aj, A+Aj, -A-Aj, A-Aj, A-Aj, A+Aj, A+Aj, -A-Aj, -A+Aj, A+Aj, -A-Aj, -A-Aj, A-Aj, - A+Aj, A-Aj, A+Aj, -A+Aj, A-Aj, -A+Aj, -A+Aj, A+Aj, A-Aj, A+Aj, -A+Aj, A+Aj, A-Aj, -A+Aj, - A-Aj, A-Aj, A+Aj, -A+Aj, -A-Aj, A+Aj, A-Aj, A+Aj, -A-Aj, A+Aj, -A-Aj, A+Aj, A-Aj, A-Aj, A+Aj, A+Aj, A+Aj, A+Aj, A-Aj, A-Aj, -A-Aj, A-Aj, -A-Aj, -A-Aj, -A-Aj, A-Aj, -A+Aj, -A+Aj, - A+Aj, -A-Aj, A-Aj, -A+Aj, -A+Aj, A-Aj, -A-Aj, -A-Aj, A-Aj, -A-Aj, A-Aj, -A+Aj, A+Aj, -A-Aj, - A+Aj, -A+Aj, -A+Aj, -A+Aj, A+Aj, -A+Aj, A-Aj, A-Aj, -A-Aj, -A-Aj |
| 11 | Polarization 1 | -A+Aj, A+Aj, -A+Aj, A+Aj, -A+Aj, -A-Aj, A+Aj, -A+Aj, -A+Aj, -A+Aj, -A+Aj, -A-Aj, A+Aj, A+Aj, -A-Aj, -A-Aj, -A-Aj, -A-Aj, A+Aj, A-Aj, -A+Aj, A-Aj, -A-Aj, -A-Aj, -A+Aj, A-Aj, A+Aj, A+Aj, A+Aj, -A-Aj, -A-Aj, A+Aj, A-Aj, A-Aj, -A-Aj, -A+Aj, A-Aj, -A+Aj, A-Aj, A-Aj, -A+Aj, -A-Aj, A+Aj, A+Aj, A+Aj, A-Aj, -A+Aj, A-Aj, A+Aj, A-Aj, -A-Aj, -A-Aj, A+Aj, A+Aj, A-Aj, A-Aj, A+Aj, -A-Aj, -A+Aj, A-Aj, -A-Aj, A-Aj, -A-Aj, A+Aj, A-Aj, A+Aj, A+Aj, -A+Aj, -A+Aj, -A+Aj, A-Aj, A-Aj, A-Aj, -A+Aj, -A-Aj, -A-Aj, -A+Aj, A-Aj, -A-Aj, -A+Aj |
| | Polarization 2 | A+Aj, A+Aj, -A-Aj, A-Aj, A-Aj, A+Aj, A+Aj, -A-Aj, -A+Aj, A+Aj, -A-Aj, -A-Aj, A-Aj, -A+Aj, A-Aj, A+Aj, -A+Aj, A-Aj, -A+Aj, -A+Aj, A+Aj, A-Aj, A+Aj, -A+Aj, A+Aj, A-Aj, -A+Aj, -A-Aj, A-Aj, A+Aj, -A+Aj, -A-Aj, A+Aj, A-Aj, A+Aj, -A-Aj, A+Aj, -A-Aj, A+Aj, A-Aj, A-Aj, A+Aj, A+Aj, A+Aj, A+Aj, A-Aj, A-Aj, -A-Aj, A-Aj, -A-Aj, -A-Aj, -A-Aj, A-Aj, -A+Aj, -A+Aj, -A+Aj, -A-Aj, - A-Aj, -A+Aj, -A+Aj, A-Aj, -A-Aj, -A-Aj, A-Aj, -A-Aj, A-Aj, -A+Aj, A+Aj, -A-Aj, -A+Aj, -A+Aj, - A+Aj, -A+Aj, A+Aj, -A+Aj, A-Aj, A-Aj, -A-Aj, -A-Aj, -A+Aj |
| 12 | Polarization 1 | -A+Aj, A+Aj, -A+Aj, A+Aj, -A+Aj, -A-Aj, A+Aj, -A+Aj, -A+Aj, -A+Aj, -A+Aj, -A-Aj, A+Aj, A+Aj, -A-Aj, -A-Aj, -A-Aj, -A-Aj, A+Aj, A-Aj, -A+Aj, A-Aj, -A-Aj, -A-Aj, -A+Aj, A-Aj, A+Aj, A+Aj, A+Aj, -A-Aj, -A-Aj, A+Aj, A-Aj, A-Aj, -A-Aj, -A+Aj, A-Aj, -A+Aj, A-Aj, A-Aj, -A+Aj, -A-Aj, A+Aj, A+Aj, A+Aj, A-Aj, -A+Aj, A-Aj, A+Aj, A-Aj, -A-Aj, -A-Aj, A+Aj, A+Aj, A-Aj, A-Aj, A+Aj, -A-Aj, -A+Aj, A-Aj, -A-Aj, A-Aj, -A-Aj, A+Aj, A-Aj, A+Aj, A+Aj, -A+Aj, -A+Aj, -A+Aj, A-Aj, A-Aj, A-Aj, -A+Aj, -A-Aj, -A-Aj, -A+Aj, A-Aj, -A-Aj, -A+Aj |
| | Polarization 2 | A+Aj, A+Aj, A-Aj, -A+Aj, -A+Aj, -A+Aj, A+Aj, A-Aj, -A-Aj, A+Aj, A-Aj, -A-Aj, -A+Aj, -A-Aj, A+Aj, -A+Aj, A-Aj, A+Aj, -A-Aj, A-Aj, A+Aj, A+Aj, -A+Aj, A-Aj, A+Aj, A+Aj, -A-Aj, A-Aj, - A+Aj, -A+Aj, A-Aj, A-Aj, -A+Aj, A+Aj, -A+Aj, A-Aj, -A+Aj, A-Aj, -A+Aj, A+Aj, -A+Aj, -A+Aj, A+Aj, A+Aj, A+Aj, A+Aj, -A+Aj, -A-Aj, -A+Aj, -A-Aj, -A-Aj, -A-Aj, -A+Aj, -A-Aj, A-Aj, A-Aj, A-Aj, -A-Aj, -A-Aj, A-Aj, A+Aj, -A-Aj, -A-Aj, -A+Aj, -A-Aj, -A+Aj, -A-Aj, A+Aj, A-Aj, -A-Aj, A-Aj, A-Aj, A-Aj, A+Aj, A-Aj, A+Aj, -A+Aj, -A-Aj, -A-Aj, -A-Aj |

(continued)

| Index | Polarization | Pilot sequence |
|---|---|---|
| 13 | Polarization 1 | -A-Aj, -A-Aj, -A-Aj, A-Aj, A+Aj, -A+Aj, A+Aj, -A+Aj, -A+Aj, -A+Aj, -A-Aj, -A+Aj, A+Aj, -A-Aj, A-Aj, -A-Aj, A-Aj, -A-Aj, -A-Aj, A+Aj, -A+Aj, -A-Aj, -A-Aj, -A+Aj, -A+Aj, -A+Aj, -A-Aj, A-Aj, -A-Aj, -A-Aj, -A-Aj, A-Aj, -A-Aj, A-Aj, A+Aj, A+Aj, A+Aj, A+Aj, A-Aj, A-Aj, A+Aj, A-Aj, - A+Aj, A-Aj, -A+Aj, A-Aj, A+Aj, A-Aj, -A+Aj, -A+Aj, A-Aj, A-Aj, -A+Aj, -A-Aj, A+Aj, A+Aj, - A+Aj, A-Aj, A+Aj, A+Aj, -A+Aj, -A-Aj, A+Aj, -A+Aj, A-Aj, A+Aj, -A-Aj, A-Aj, -A-Aj, -A+Aj, A+Aj, -A-Aj, -A+Aj, A+Aj, A-Aj, A-Aj, A-Aj, -A+Aj, A+Aj, A+Aj |
| | Polarization 2 | A-Aj, -A-Aj, -A+Aj, A-Aj, -A-Aj, -A-Aj, A-Aj, -A+Aj, -A+Aj, -A+Aj, A-Aj, A-Aj, A-Aj, A+Aj, A+Aj, -A+Aj, A+Aj, -A-Aj, -A+Aj, -A-Aj, -A+Aj, A-Aj, -A-Aj, A+Aj, -A+Aj, -A+Aj, A+Aj, A+Aj, -A-Aj, -A-Aj, -A+Aj, A+Aj, -A+Aj, A-Aj, -A+Aj, A+Aj, A+Aj, A+Aj, -A-Aj, A-Aj, -A+Aj, -A+Aj, A-Aj, -A+Aj, A-Aj, -A-Aj, -A+Aj, -A+Aj, A+Aj, -A-Aj, -A-Aj, A+Aj, A+Aj, A+Aj, -A+Aj, A-Aj, - A-Aj, -A-Aj, -A+Aj, A-Aj, -A+Aj, A+Aj, -A-Aj, -A-Aj, -A-Aj, -A-Aj, A+Aj, A+Aj, -A-Aj, A-Aj, A-Aj, A-Aj, A-Aj, A+Aj, -A-Aj, A-Aj, A+Aj, A-Aj, A+Aj, A-Aj |
| 14 | Polarization 1 | -A-Aj, -A-Aj, -A+Aj, -A+Aj, A-Aj. A+Aj, A-Aj, A-Aj, A-Aj, A-Aj, -A-Aj, A+Aj, A-Aj, -A+Aj, -A-Aj, -A+Aj, -A-Aj, -A-Aj, -A+Aj, A-Aj, A-Aj, -A-Aj, -A-Aj, A-Aj, A-Aj, A-Aj, -A+Aj, -A-Aj, -A-Aj, -A-Aj, -A+Aj, -A-Aj, -A+Aj, -A+Aj, A+Aj, A+Aj, A+Aj, A+Aj, -A+Aj, -A+Aj, A+Aj, -A-Aj, A+Aj, -A-Aj, A+Aj, -A+Aj, A+Aj, -A-Aj, A-Aj, A+Aj, -A+Aj, -A-Aj, A-Aj, -A+Aj, A+Aj, A-Aj, A+Aj, -A+Aj, A+Aj, A-Aj, A-Aj, -A+Aj, A-Aj, A+Aj, -A+Aj, A-Aj, -A+Aj, -A-Aj, -A-Aj, A+Aj, A-Aj, -A-Aj, A+Aj, A+Aj, -A+Aj, -A+Aj, -A-Aj, A+Aj, A+Aj, A-Aj |
| | Polarization 2 | A-Aj, -A-Aj, -A+Aj, A-Aj, -A-Aj, -A-Aj, A-Aj, -A+Aj, -A+Aj, -A+Aj, A-Aj, A-Aj, A-Aj, A+Aj, A+Aj, -A+Aj, A+Aj, -A-Aj, -A+Aj, -A-Aj, -A+Aj, A-Aj, -A-Aj, A+Aj, -A+Aj, -A+Aj, A+Aj, A+Aj, -A-Aj, -A-Aj, -A+Aj, A+Aj, -A+Aj, A-Aj, -A+Aj, A+Aj, A+Aj, A+Aj, -A-Aj, A-Aj, -A+Aj, -A+Aj, A-Aj, -A+Aj, A-Aj, -A-Aj, -A+Aj, -A+Aj, A+Aj, -A-Aj, -A-Aj, A+Aj, A+Aj, A+Aj, -A+Aj, A-Aj, - A-Aj, -A-Aj, -A+Aj, A-Aj, -A+Aj, A+Aj, -A-Aj, -A-Aj, -A-Aj, -A-Aj, A+Aj, A+Aj, -A-Aj, A-Aj, A-Aj, A-Aj, A-Aj, A+Aj, -A-Aj, A-Aj, A+Aj, A-Aj, A+Aj, A-Aj |
| 15 | Polarization 1 | -A-Aj, -A-Aj, A-Aj, A+Aj, -A+Aj, A+Aj, -A+Aj, -A+Aj, -A+Aj, -A-Aj, -A+Aj, A+Aj, -A-Aj, A-Aj, -A-Aj, A-Aj, -A-Aj, -A-Aj, A+Aj, -A+Aj, -A-Aj, -A-Aj, -A+Aj, -A+Aj, -A+Aj, -A-Aj, A-Aj, -A-Aj, -A-Aj, -A-Aj, A-Aj, -A-Aj, A-Aj, A+Aj, A+Aj, A+Aj, A+Aj, A-Aj, A-Aj, A+Aj, A-Aj, -A+Aj, A-Aj, -A+Aj, A-Aj, A+Aj, A-Aj, -A+Aj, -A+Aj, A-Aj, A-Aj, -A+Aj, -A-Aj, A+Aj, A+Aj, -A+Aj, -A-Aj, A+Aj, -A+Aj, A-Aj, A+Aj, -A-Aj, A-Aj, -A-Aj, -A+Aj, A+Aj, -A-Aj, - A+Aj, A+Aj, A-Aj, A-Aj, A-Aj, -A+Aj, A+Aj, A+Aj, -A-Aj |
| | Polarization 2 | A-Aj, -A-Aj, -A+Aj, A-Aj, -A-Aj, -A-Aj, A-Aj, -A+Aj, -A+Aj, -A+Aj, A-Aj, A-Aj, A-Aj, A+Aj, A+Aj, -A+Aj, A+Aj, -A-Aj, -A+Aj, -A-Aj, -A+Aj, A-Aj, -A-Aj, A+Aj, -A+Aj, -A+Aj, A+Aj, A+Aj, -A-Aj, -A-Aj, -A+Aj, A+Aj, -A+Aj, A-Aj, -A+Aj, A+Aj, A+Aj, A+Aj, -A-Aj, A-Aj, -A+Aj, -A+Aj, A-Aj, -A+Aj, A-Aj, -A-Aj, -A+Aj, -A+Aj, A+Aj, -A-Aj, -A-Aj, A+Aj, A+Aj, A+Aj, -A+Aj, A-Aj, - A-Aj, -A-Aj, -A+Aj, A-Aj, -A+Aj, A+Aj, -A-Aj, -A-Aj, -A-Aj, -A-Aj, A+Aj, A+Aj, -A-Aj, A-Aj, A-Aj, A-Aj, A-Aj, A+Aj, -A-Aj, A-Aj, A+Aj, A-Aj, A+Aj, A-Aj |
| 16 | Polarization 1 | A-Aj, -A-Aj, -A-Aj, -A+Aj, -A+Aj, A-Aj, A+Aj, A-Aj, A-Aj, A-Aj, A-Aj, -A-Aj, A+Aj, A-Aj, - A+Aj, -A-Aj, -A+Aj, -A-Aj, -A-Aj, -A+Aj, A-Aj, A-Aj, -A-Aj, -A-Aj, A-Aj, A-Aj, A-Aj, -A+Aj, - A-Aj, -A-Aj, -A-Aj, -A+Aj, -A-Aj, -A+Aj, -A+Aj, A+Aj, A+Aj, A+Aj, A+Aj, -A+Aj, -A+Aj, A+Aj, -A-Aj, A+Aj, -A-Aj, A+Aj, -A+Aj, A+Aj, -A-Aj, A-Aj, A+Aj, -A+Aj, -A-Aj, A-Aj, -A+Aj, A+Aj, A-Aj, A+Aj, -A+Aj, A+Aj, A-Aj, A-Aj, -A+Aj, A-Aj, A+Aj, -A+Aj, A-Aj, -A+Aj, -A-Aj, -A-Aj, A+Aj, A-Aj, -A-Aj, A+Aj, A+Aj, -A+Aj, -A+Aj, -A-Aj, A+Aj, A+Aj |
| | Polarization 2 | A-Aj, -A-Aj, -A+Aj, A-Aj, -A-Aj, -A-Aj, A-Aj, -A+Aj, -A+Aj, -A+Aj, A-Aj, A-Aj, A-Aj, A+Aj, A+Aj, -A+Aj, A+Aj, -A-Aj, -A+Aj, -A-Aj, -A+Aj, A-Aj, -A-Aj, A+Aj, -A+Aj, -A+Aj, A+Aj, A+Aj, -A-Aj, -A-Aj, -A+Aj, A+Aj, -A+Aj, A-Aj, -A+Aj, A+Aj, A+Aj, A+Aj, -A-Aj, A-Aj, -A+Aj, -A+Aj, A-Aj, -A+Aj, A-Aj, -A-Aj, -A+Aj, -A+Aj, A+Aj, -A-Aj, -A-Aj, A+Aj, A+Aj, A+Aj, -A+Aj, A-Aj, - A-Aj, -A-Aj, -A+Aj, A-Aj, -A+Aj, A+Aj, -A-Aj, -A-Aj, -A-Aj, -A-Aj, A+Aj, A+Aj, -A-Aj, A-Aj, A-Aj, A-Aj, A-Aj, A+Aj, -A-Aj, A-Aj, A+Aj, A-Aj, A+Aj, A-Aj |

**Table 27-2**

| Index | Polarization | Pilot sequence |
|---|---|---|
| 1 | Polarization 1 | -A-Aj, A-Aj, -A+Aj, -A-Aj, -A-Aj, A-Aj, -A-Aj, -A-Aj, -A+Aj, -A-Aj, A-Aj, A-Aj, A+Aj, -A+Aj, -A-Aj, -A+Aj, A-Aj, -A+Aj, A-Aj. A+Aj, A-Aj, -A-Aj, A+Aj, -A+Aj, A-Aj, -A+Aj, -A+Aj, -A-Aj, A+Aj, A-Aj, A-Aj, A+Aj, A-Aj, A+Aj, -A-Aj, -A-Aj, -A-Aj, -A-Aj, A+Aj, -A-Aj, -A+Aj, A+Aj, A-Aj, -A-Aj, -A-Aj, A-Aj, A+Aj, A+Aj, -A-Aj, A-Aj, A+Aj, -A-Aj, A+Aj, A+Aj, -A+Aj, -A+Aj, - A+Aj, A+Aj, A+Aj, -A-Aj, -A+Aj, -A-Aj, -A+Aj, -A+Aj, A-Aj, A+Aj, -A+Aj, A+Aj, A-Aj, A+Aj, A+Aj, A+Aj, -A+Aj, A-Aj, A-Aj, A-Aj, -A+Aj, -A+Aj, A+Aj, -A-Aj |
| | Polarization 2 | -A+Aj, A+Aj, -A-Aj, -A+Aj, -A+Aj, A+Aj, -A+Aj, -A+Aj, -A-Aj, -A+Aj, A+Aj, A+Aj, A-Aj, -A-Aj, -A+Aj, -A-Aj, A+Aj, -A-Aj, A+Aj, A-Aj, A+Aj, -A+Aj, A-Aj, -A-Aj, A+Aj, -A-Aj, -A-Aj, - A+Aj, A-Aj, A+Aj, A+Aj, A-Aj, A+Aj, A-Aj, -A+Aj, -A+Aj, -A+Aj, -A+Aj, A-Aj, -A+Aj, -A-Aj, A-Aj, A+Aj, -A+Aj, -A+Aj, A+Aj, A-Aj, A-Aj, -A+Aj, A+Aj, A-Aj, -A+Aj, A-Aj, A-Aj, -A-Aj, - A-Aj, -A-Aj, A-Aj, A-Aj, -A+Aj, -A-Aj, -A+Aj, -A-Aj, -A-Aj, A+Aj, A-Aj, -A-Aj, A-Aj, A+Aj, A-Aj, A-Aj, A-Aj, -A-Aj, A+Aj, A+Aj, A+Aj, -A-Aj, -A-Aj, A-Aj, -A+Aj |
| 2 | Polarization 1 | -A-Aj, A-Aj, -A+Aj, -A-Aj, -A-Aj, A-Aj, -A-Aj, -A-Aj, -A+Aj, -A-Aj, A-Aj, A-Aj, A+Aj, -A+Aj, -A-Aj, -A+Aj, A-Aj, -A+Aj, A-Aj. A+Aj, A-Aj, -A-Aj, A+Aj, -A+Aj, A-Aj, -A+Aj, -A+Aj, -A-Aj, A+Aj, A-Aj, A-Aj, A+Aj, A-Aj, A+Aj, -A-Aj, -A-Aj, -A-Aj, -A-Aj, A+Aj, -A-Aj, -A+Aj, A+Aj, A-Aj, -A-Aj, -A-Aj, A-Aj, A+Aj, A+Aj, -A-Aj, A-Aj, A+Aj, -A-Aj, A+Aj, A+Aj, -A+Aj, -A+Aj, - A+Aj, A+Aj, A+Aj, -A-Aj, -A+Aj, -A-Aj, -A+Aj, -A+Aj, A-Aj, A+Aj, -A+Aj, A+Aj, A-Aj, A+Aj, A+Aj, A+Aj, -A+Aj, A-Aj, A-Aj, A-Aj, -A+Aj, -A+Aj, A+Aj, -A-Aj |
| | Polarization 2 | A-Aj, -A-Aj, A+Aj, A-Aj, A-Aj, -A-Aj, A-Aj, A-Aj, A+Aj, A-Aj, -A-Aj, -A-Aj, -A+Aj, A+Aj, A-Aj, A+Aj, -A-Aj, A+Aj, -A-Aj, -A+Aj, -A-Aj, A-Aj, -A+Aj, A+Aj, -A-Aj, A+Aj, A+Aj, A-Aj, - A+Aj, -A-Aj, -A-Aj, -A+Aj, -A-Aj, -A+Aj, A-Aj, A-Aj, A-Aj, A-Aj, -A+Aj, A-Aj, A+Aj, -A+Aj, - A-Aj, A-Aj, A-Aj, -A-Aj, -A+Aj, -A+Aj, A-Aj, -A-Aj, -A+Aj, A-Aj, -A+Aj, -A+Aj, A+Aj, A+Aj, A+Aj, -A+Aj, -A+Aj, A-Aj, A+Aj, A-Aj, A+Aj, A+Aj, -A-Aj, -A+Aj, A+Aj, -A+Aj, -A-Aj, - A+Aj, -A+Aj, -A+Aj, A+Aj, -A-Aj, -A-Aj, -A-Aj, A+Aj, A+Aj, -A+Aj, A-Aj |
| 3 | Polarization 1 | A+Aj, -A+Aj, A-Aj, A+Aj, A+Aj, -A+Aj, A+Aj, A+Aj, A-Aj, A+Aj, -A+Aj, -A+Aj, -A-Aj, A-Aj, A+Aj, A-Aj, -A+Aj, A-Aj, -A+Aj, -A-Aj, -A+Aj, A+Aj, -A-Aj, A-Aj, -A+Aj, A-Aj, A-Aj, A+Aj, - A-Aj, -A+Aj, -A+Aj, -A-Aj, -A+Aj, -A-Aj, A+Aj, A+Aj, A+Aj, A+Aj, -A-Aj, A+Aj, A-Aj, -A-Aj, -A+Aj, A+Aj, A+Aj, -A+Aj, -A-Aj, -A-Aj, A+Aj, -A+Aj, -A-Aj, A+Aj, -A-Aj, -A-Aj, A-Aj, A-Aj, A-Aj, -A-Aj, -A-Aj, A+Aj, A-Aj, A+Aj, A-Aj, A-Aj, -A+Aj, -A-Aj, A-Aj, -A-Aj, -A+Aj, -A-Aj, - A-Aj, -A-Aj, A-Aj, -A+Aj, -A+Aj, -A+Aj, A-Aj, A-Aj, -A-Aj, A+Aj |
| | Polarization 2 | -A+Aj, A+Aj, -A-Aj, -A+Aj, -A+Aj, A+Aj, -A+Aj, -A+Aj, -A-Aj, -A+Aj, A+Aj, A+Aj, A-Aj, -A-Aj, -A+Aj, -A-Aj, A+Aj, -A-Aj, A+Aj, A-Aj, A+Aj, -A+Aj, A-Aj, -A-Aj, A+Aj, -A-Aj, -A-Aj, - A+Aj, A-Aj, A+Aj, A+Aj, A-Aj, A+Aj, A-Aj, -A+Aj, -A+Aj, -A+Aj, -A+Aj, A-Aj, -A+Aj, -A-Aj, A-Aj, A+Aj, -A+Aj, -A+Aj, A+Aj, A-Aj, A-Aj, -A+Aj, A+Aj, A-Aj, -A+Aj, A-Aj, A-Aj, -A-Aj, - A-Aj, -A-Aj, A-Aj, A-Aj, -A+Aj, -A-Aj, -A+Aj, -A-Aj, -A-Aj, A+Aj, A-Aj, -A-Aj, A-Aj, A+Aj, A-Aj, A-Aj, A-Aj, -A-Aj, A+Aj, A+Aj, A+Aj, -A-Aj, -A-Aj, A-Aj, -A+Aj |
| 4 | Polarization 1 | A+Aj, -A+Aj, A-Aj, A+Aj, A+Aj, -A+Aj, A+Aj, A+Aj, A-Aj, A+Aj, -A+Aj, -A+Aj, -A-Aj, A-Aj, A+Aj, A-Aj, -A+Aj, A-Aj, -A+Aj, -A-Aj, -A+Aj, A+Aj, -A-Aj, A-Aj, -A+Aj, A-Aj, A-Aj, A+Aj, - A-Aj, -A+Aj, -A+Aj, -A-Aj, -A+Aj, -A-Aj, A+Aj, A+Aj, A+Aj, A+Aj, -A-Aj, A+Aj, A-Aj, -A-Aj, -A+Aj, A+Aj, A+Aj, -A+Aj, -A-Aj, -A-Aj, A+Aj, -A+Aj, -A-Aj, A+Aj, -A-Aj, -A-Aj, A-Aj, A-Aj, A-Aj, -A-Aj, -A-Aj, A+Aj, A-Aj, A+Aj, A-Aj, A-Aj, -A+Aj, -A-Aj, A-Aj, -A-Aj, -A+Aj, -A-Aj, - A-Aj, -A-Aj, A-Aj, -A+Aj, -A+Aj, -A+Aj, A-Aj, A-Aj, -A-Aj, A+Aj |
| | Polarization 2 | A-Aj, -A-Aj, A+Aj, A-Aj, A-Aj, -A-Aj, A-Aj, A-Aj, A+Aj, A-Aj, -A-Aj, -A-Aj, -A+Aj, A+Aj, A-Aj, A+Aj, -A-Aj, A+Aj, -A-Aj, -A+Aj, -A-Aj, A-Aj, -A+Aj, A+Aj, -A-Aj, A+Aj, A+Aj, A-Aj, - A+Aj, -A-Aj, -A+Aj, -A-Aj, -A+Aj, A-Aj, A-Aj, A-Aj, A-Aj, -A+Aj, A-Aj, A+Aj, -A+Aj, - A-Aj, A-Aj, A-Aj, -A-Aj, -A+Aj, -A+Aj, A-Aj, -A-Aj, -A+Aj, A-Aj, -A+Aj, -A+Aj, A+Aj, A+Aj, A+Aj, -A+Aj, -A+Aj, A-Aj, A+Aj, A-Aj, A+Aj, A+Aj, -A-Aj, -A+Aj, A+Aj, -A+Aj, -A-Aj, - A+Aj, -A+Aj, -A+Aj, A+Aj, -A-Aj, -A-Aj, -A-Aj, A+Aj, A+Aj, -A+Aj, A-Aj |

(continued)

| Index | Polarization | Pilot sequence |
|---|---|---|
| 5 | Polarization 1 | -A-Aj, A+Aj, A-Aj, A-Aj, -A+Aj, -A+Aj, -A+Aj, A-Aj, A+Aj, A+Aj, A+Aj, -A+Aj, A+Aj, A-Aj, A+Aj, -A+Aj, A-Aj, A-Aj, -A-Aj, A-Aj, -A-Aj, A+Aj, A+Aj, A-Aj, A-Aj, A-Aj, A+Aj, A+Aj, -A-Aj, A+Aj, -A+Aj, -A-Aj, A+Aj, A+Aj, -A+Aj, -A-Aj, -A-Aj, -A+Aj, A+Aj, A-Aj, -A-Aj, A+Aj, - A-Aj, -A-Aj, -A-Aj, -A-Aj, A+Aj, -A+Aj, A+Aj, -A+Aj, -A+Aj, A+Aj, -A-Aj, A-Aj, A-Aj, -A+Aj, A-Aj, A+Aj, -A-Aj, -A+Aj, A+Aj, -A+Aj, A-Aj, -A+Aj, A-Aj, -A-Aj, A-Aj, A+Aj, -A+Aj, -A+Aj, -A-Aj, A-Aj, -A-Aj, -A-Aj, -A+Aj, -A-Aj, -A-Aj, A-Aj, -A+Aj, -A-Aj |
| | Polarization 2 | -A+Aj, A-Aj, A+Aj, A+Aj, -A-Aj, -A-Aj, -A-Aj, A+Aj, A-Aj, A-Aj, A-Aj, -A-Aj, A-Aj, A+Aj, A-Aj, -A-Aj, A+Aj, A+Aj, -A+Aj, A+Aj, -A+Aj, A-Aj, A-Aj, A+Aj, A+Aj, A+Aj, A-Aj, A-Aj, - A+Aj, A-Aj, -A-Aj, -A+Aj, A-Aj, A-Aj, -A-Aj, -A+Aj, A+Aj, -A-Aj, A-Aj, A+Aj, -A+Aj, A-Aj, - A+Aj, -A+Aj, -A+Aj, -A+Aj, A-Aj, -A-Aj, A-Aj, -A-Aj, -A-Aj, A-Aj, -A+Aj, A+Aj, A+Aj, -A-Aj, A+Aj, A-Aj, -A+Aj, -A-Aj, A-Aj, -A-Aj, A+Aj, -A-Aj, A+Aj, -A+Aj, A+Aj, A-Aj, -A-Aj, -A-Aj, - A+Aj, A+Aj, -A+Aj, -A+Aj, -A-Aj, -A+Aj, -A+Aj, A+Aj, -A-Aj, -A+Aj |
| 6 | Polarization 1 | -A-Aj, A+Aj, A-Aj, A-Aj, -A+Aj, -A+Aj, -A+Aj, A-Aj, A+Aj, A+Aj, A+Aj, -A+Aj, A+Aj, A-Aj, A+Aj, -A+Aj, A-Aj, A-Aj, -A-Aj, A-Aj, -A-Aj, A+Aj, A+Aj, A-Aj, A-Aj, A-Aj, A+Aj, A+Aj, -A-Aj, A+Aj, -A+Aj, -A-Aj, A+Aj, A+Aj, -A+Aj, -A-Aj, -A-Aj, -A+Aj, A+Aj, A-Aj, -A-Aj, A+Aj, - A-Aj, -A-Aj, -A-Aj, -A-Aj, A+Aj, -A+Aj, A+Aj, -A+Aj, -A+Aj, A+Aj, -A-Aj, A-Aj, A-Aj, -A+Aj, A-Aj, A+Aj, -A-Aj, -A+Aj, A+Aj, -A+Aj, A-Aj, -A+Aj, A-Aj, -A-Aj, A-Aj, A+Aj, -A+Aj, -A+Aj, -A-Aj, A-Aj, -A-Aj, -A-Aj, -A+Aj, -A-Aj, -A-Aj, A-Aj, -A+Aj, -A-Aj |
| | Polarization 2 | A-Aj, -A+Aj, -A-Aj, -A-Aj, A+Aj, A+Aj, A+Aj, -A-Aj, -A+Aj, -A+Aj, -A+Aj, A+Aj, -A+Aj, -A-Aj, -A+Aj, A+Aj, -A-Aj, -A-Aj, A-Aj, -A-Aj, A-Aj, -A+Aj, -A+Aj, -A-Aj, -A-Aj, -A-Aj, -A+Aj, - A+Aj, A-Aj, -A+Aj, A+Aj, A-Aj, -A+Aj, -A+Aj, A+Aj, A-Aj, A-Aj, A+Aj, -A+Aj, -A-Aj, A-Aj, - A+Aj, A- Aj, A-Aj, A-Aj, A-Aj, -A+Aj, A+Aj, -A+Aj, A+Aj, A+Aj, -A+Aj, A-Aj, -A-Aj, -A-Aj, A+Aj, -A-Aj, -A+Aj, A-Aj, A+Aj, -A+Aj, A+Aj, -A-Aj, A+Aj, -A-Aj, A-Aj, -A-Aj, -A+Aj, A+Aj, A+Aj, A-Aj, -A- Aj, A-Aj, A-Aj, A+Aj, A-Aj, A-Aj, -A-Aj, A+Aj, A-Aj |
| 7 | Polarization 1 | A+Aj, -A-Aj, -A+Aj, -A+Aj, A-Aj, A-Aj, A-Aj, -A+Aj, -A-Aj, -A-Aj, -A-Aj, A-Aj, -A-Aj, -A+Aj, -A- Aj, A-Aj, -A+Aj, -A+Aj, A+Aj, -A+Aj, A+Aj, -A-Aj, -A-Aj, -A+Aj, -A+Aj, -A+Aj, -A-Aj, - A-Aj, A+Aj, -A-Aj, A-Aj, A+Aj, -A-Aj, -A-Aj, A-Aj, A+Aj, A+Aj, A-Aj, -A-Aj, -A+Aj, A+Aj, - A-Aj, A+Aj, A+Aj, A+Aj, A+Aj, -A-Aj, A-Aj, -A-Aj, A-Aj, A-Aj, -A-Aj, A+Aj, -A+Aj, -A+Aj, A-Aj, -A+Aj, -A-Aj, A+Aj, A-Aj, -A-Aj, A-Aj, -A+Aj, A-Aj, -A+Aj, A+Aj, -A+Aj, -A-Aj, A-Aj, A-Aj, A+Aj, -A+Aj, A+Aj, A+Aj, A-Aj, A+Aj, A+Aj, -A+Aj, A-Aj, A+Aj |
| | Polarization 2 | -A+Aj, A-Aj, A+Aj, A+Aj, -A-Aj, -A-Aj, -A-Aj, A+Aj, A-Aj, A-Aj, A-Aj, -A-Aj, A-Aj, A+Aj, A-Aj, -A-Aj, A+Aj, A+Aj, -A+Aj, A+Aj, -A+Aj, A-Aj, A-Aj, A+Aj, A+Aj, A+Aj, A-Aj, A-Aj, - A+Aj, A-Aj, -A-Aj, -A+Aj, A-Aj, A-Aj, -A-Aj, -A+Aj, A+Aj, -A-Aj, A-Aj, A+Aj, -A+Aj, A-Aj, - A+Aj, -A+Aj, -A+Aj, -A+Aj, A-Aj, -A-Aj, A-Aj, -A-Aj, -A-Aj, A-Aj, -A+Aj, A+Aj, A+Aj, -A-Aj, A+Aj, -A-Aj, A-Aj, -A-Aj, A+Aj, -A-Aj, A+Aj, -A+Aj, A+Aj, A-Aj, -A-Aj, -A-Aj, - A+Aj, A+Aj, -A+Aj, -A+Aj, -A-Aj, -A+Aj, -A+Aj, A+Aj, -A-Aj, -A+Aj |
| 8 | Polarization 1 | A+Aj, -A-Aj, -A+Aj, -A+Aj, A-Aj, A-Aj, A-Aj, -A+Aj, -A-Aj, -A-Aj, -A-Aj, A-Aj, -A-Aj, -A+Aj, -A- Aj, A-Aj, -A+Aj, -A+Aj, A+Aj, -A+Aj, A+Aj, -A-Aj, -A-Aj, -A+Aj, -A+Aj, -A+Aj, -A-Aj, - A-Aj, A+Aj, -A-Aj, A-Aj, A+Aj, -A-Aj, -A-Aj, A-Aj, A+Aj, A+Aj, A-Aj, -A-Aj, -A+Aj, A+Aj, - A-Aj, A+Aj, A+Aj, A+Aj, A+Aj, -A-Aj, A-Aj, -A-Aj, A-Aj, A-Aj, -A-Aj, A+Aj, -A+Aj, -A+Aj, A-Aj, -A+Aj, -A-Aj, A+Aj, A-Aj, -A-Aj, A-Aj, -A+Aj, A-Aj, -A+Aj, A+Aj, -A+Aj, -A-Aj, A-Aj, A-Aj, A+Aj, -A+Aj, A+Aj, A+Aj, A-Aj, A+Aj, A+Aj, -A+Aj, A-Aj, A+Aj |
| | Polarization 2 | A-Aj, -A+Aj, -A-Aj, -A-Aj, A+Aj, A+Aj, A+Aj, -A-Aj, -A+Aj, -A+Aj, -A+Aj, A+Aj, -A+Aj, -A-Aj, -A+Aj, A+Aj, -A-Aj, -A-Aj, A-Aj, -A-Aj, A-Aj, -A+Aj, -A+Aj, -A-Aj, -A-Aj, -A-Aj, -A+Aj, - A+Aj, A-Aj, -A+Aj, A+Aj, A-Aj, -A+Aj, -A+Aj, A+Aj, A-Aj, A-Aj, A+Aj, -A+Aj, -A-Aj, A-Aj, - A+Aj, A- Aj, A-Aj, A-Aj, A-Aj, -A+Aj, A+Aj, -A+Aj, A+Aj, A+Aj, -A+Aj, A-Aj, -A-Aj, -A-Aj, A+Aj, -A-Aj, -A+Aj, A-Aj, A+Aj, -A+Aj, A+Aj, -A-Aj, A+Aj, -A-Aj, A-Aj, -A-Aj, -A+Aj, A+Aj, A+Aj, A-Aj, -A- Aj, A-Aj, A-Aj, A+Aj, A-Aj, A-Aj, -A-Aj, A+Aj, A-Aj |

(continued)

| Index | Polarization | Pilot sequence |
|---|---|---|
| 9 | Polarization 1 | A-Aj, -A+Aj, -A-Aj, A-Aj, -A-Aj, A+Aj, -A-Aj, -A-Aj, -A-Aj, A-Aj, A+Aj, A+Aj, A+Aj, A+Aj, A+Aj, -A+Aj, A+Aj, A-Aj, -A+Aj, -A-Aj, -A-Aj, -A+Aj, A-Aj, A-Aj, -A-Aj, A-Aj, A+Aj, -A+Aj, A-Aj, A-Aj, -A+Aj, -A+Aj, -A+Aj, A+Aj, A+Aj, -A+Aj, -A+Aj, A+Aj, -A-Aj, A-Aj, -A-Aj, A+Aj, A+Aj, -A-Aj, -A+Aj, A+Aj, -A+Aj, A+Aj, A-Aj, A-Aj, -A-Aj, -A+Aj, -A-Aj, -A-Aj, A-Aj, -A+Aj, A+Aj, -A-Aj, -A+Aj, -A+Aj, -A-Aj, A-Aj, -A-Aj, A-Aj, A-Aj, -A-Aj, A-Aj, -A+Aj, A+Aj, A+Aj, - A+Aj, -A-Aj, -A+Aj, -A-Aj, -A-Aj, A+Aj, A+Aj, A+Aj, A-Aj, A-Aj |
| | Polarization 2 | -A+Aj, A-Aj, -A-Aj, A-Aj, -A+Aj. A-Aj, -A+Aj, -A+Aj, A-Aj, A-Aj, -A-Aj, -A-Aj, -A+Aj, -A-Aj, -A+Aj, A+Aj, -A+Aj, -A-Aj, A-Aj, A+Aj, -A+Aj, A+Aj, -A-Aj, -A+Aj, A+Aj, A-Aj, A+Aj, A+Aj, A+Aj, A-Aj, -A+Aj, -A+Aj, -A+Aj, -A+Aj, -A+Aj, -A-Aj, A-Aj, A-Aj, -A-Aj, A+Aj, A+Aj, A+Aj, -A+Aj, A-Aj, -A-Aj, -A+Aj, A-Aj. A+Aj, -A+Aj, A-Aj, -A-Aj, A+Aj, -A-Aj, A-Aj, A-Aj, A+Aj, - A-Aj, A-Aj, A+Aj, A-Aj, -A-Aj, -A+Aj, -A+Aj, -A-Aj, -A-Aj, A-Aj, A+Aj, -A+Aj, -A+Aj, A-Aj, - A-Aj, -A-Aj, A+Aj, A+Aj, A-Aj, -A-Aj, A-Aj, A+Aj, A+Aj, -A-Aj |
| 10 | Polarization 1 | -A+Aj, -A+Aj, A+Aj, A+Aj, A+Aj, -A-Aj, -A-Aj, A-Aj, -A-Aj, A-Aj, A+Aj, A+Aj, A-Aj, -A+Aj, - A-Aj, -A+Aj, -A+Aj, -A-Aj, -A+Aj, -A-Aj, A-Aj, A-Aj, -A-Aj, A+Aj, A-Aj, -A+Aj, -A-Aj, -A-Aj, A-Aj, -A-Aj, -A+Aj, -A+Aj, A+Aj, A-Aj, A+Aj, A-Aj, -A-Aj, A+Aj, A+Aj, -A-Aj, -A+Aj, -A-Aj, A+Aj, A-Aj, A-Aj, A+Aj, A+Aj, A-Aj, A-Aj, A-Aj, -A+Aj, -A+Aj, A-Aj, A+Aj, -A+Aj, -A-Aj, - A+Aj, -A+Aj, A-Aj, -A-Aj, -A-Aj, A-Aj, -A+Aj, A+Aj, A-Aj, A+Aj, A+Aj, A+Aj, A+Aj, A+Aj, -A+Aj, -A-Aj, -A-Aj, -A-Aj, A+Aj, -A-Aj, -A+Aj, -A-Aj, A-Aj, -A+Aj |
| | Polarization 2 | -A-Aj, A+Aj, A+Aj, -A+Aj, -A-Aj, -A+Aj, A+Aj, A+Aj, -A-Aj, -A-Aj, -A+Aj, A-Aj, A-Aj, A+Aj, -A+Aj, -A-Aj, -A-Aj, A-Aj, A-Aj, -A-Aj, -A+Aj, A+Aj, -A+Aj, -A-Aj, A+Aj, -A+Aj, -A+Aj, -A-Aj, A+Aj, -A-Aj, -A+Aj, A-Aj, A+Aj, -A+Aj, A-Aj, -A-Aj, -A+Aj, A-Aj, A+Aj, A+Aj, A+Aj, -A-Aj, -A+Aj, -A+Aj, -A-Aj, A-Aj, A-Aj, A-Aj, A-Aj, A-Aj, -A+Aj, A+Aj, A+Aj, A+Aj, -A+Aj, A+Aj, A-Aj, -A-Aj, A+Aj, A-Aj, A+Aj, -A+Aj, -A-Aj, A-Aj, A+Aj, A-Aj, -A-Aj, A-Aj, -A-Aj, -A-Aj, -A+Aj, -A+Aj, A-Aj, A-Aj, -A+Aj, A-Aj, -A+Aj, -A-Aj, -A+Aj, A-Aj |

**Table 27-3**

| Index | Pilot sequence |
|---|---|
| 1 | -A+Aj, -A+Aj, A-Aj, A+Aj, A+Aj, A+Aj, A+Aj, -A+Aj, -A-Aj, A+Aj, -A-Aj, A+Aj, A+Aj, A-Aj, A+Aj, A-Aj, A+Aj, - A-Aj, A-Aj, A+Aj, -A+Aj, -A-Aj, -A+Aj, -A+Aj, -A-Aj, -A-Aj, -A+Aj, A+Aj, A+Aj, A-Aj, -A+Aj, A+Aj, -A-Aj, A+Aj, -A+Aj, A+Aj, -A-Aj, -A+Aj, -A-Aj, -A-Aj, A+Aj, A-Aj, -A-Aj, -A+Aj, A-Aj, A+Aj, -A+Aj, A-Aj, -A-Aj, A-Aj, A+Aj, A+Aj, -A+Aj, A-Aj, A-Aj, A+Aj, -A-Aj, -A-Aj, A-Aj, A-Aj, A+Aj, A-Aj, -A+Aj, -A+Aj, -A+Aj, -A-Aj, A-Aj, - A-Aj, -A-Aj, -A-Aj, -A+Aj, -A+Aj, A-Aj, -A+Aj, A-Aj, -A-Aj, -A-Aj, A-Aj, -A-Aj, A-Aj |
| 2 | -A+Aj, A-Aj, A+Aj, A+Aj, A+Aj, A+Aj, -A+Aj, -A-Aj, A+Aj, -A-Aj, A+Aj, A+Aj, A-Aj, A+Aj, A-Aj, A+Aj, -A-Aj, A-Aj, A+Aj, -A+Aj, -A-Aj, -A+Aj, -A+Aj, -A-Aj, -A-Aj, -A+Aj, A+Aj, A+Aj, A-Aj, -A+Aj, A+Aj, -A-Aj, A+Aj, - A+Aj, A+Aj, -A-Aj, -A+Aj, -A-Aj, -A-Aj, A+Aj, A-Aj, -A-Aj, -A+Aj, A-Aj, A+Aj, -A+Aj, A-Aj, -A-Aj, A-Aj, A+Aj, A+Aj, -A+Aj, A-Aj, A-Aj, A+Aj, -A-Aj, -A-Aj, A-Aj, A-Aj, A+Aj, A-Aj, -A+Aj, -A+Aj, -A+Aj, -A-Aj, A-Aj, - A-Aj, -A-Aj, -A+Aj, -A+Aj, A-Aj, -A+Aj, A-Aj, -A-Aj, -A-Aj, A-Aj, -A-Aj, A-Aj, -A+Aj |
| 3 | A-Aj, -A+Aj, -A-Aj, -A-Aj, -A-Aj, -A-Aj, A-Aj, A+Aj, -A-Aj, A+Aj, -A-Aj, -A-Aj, -A+Aj, -A-Aj, -A+Aj, -A-Aj, A+Aj, -A+Aj, -A-Aj, A-Aj, A+Aj, A-Aj, A-Aj, A+Aj, A+Aj, A-Aj, -A-Aj, -A-Aj, -A+Aj, A-Aj, -A-Aj, A+Aj, -A-Aj, A-Aj, -A-Aj, A-Aj, A+Aj, A-Aj, A+Aj, A+Aj, -A-Aj, -A+Aj, A+Aj, A-Aj, -A+Aj, -A-Aj, A-Aj, -A+Aj, A+Aj, -A+Aj, -A-Aj, -A-Aj, A-Aj, -A+Aj, -A+Aj, -A-Aj, A+Aj, A+Aj, -A+Aj, -A+Aj, A-Aj, -A+Aj, A-Aj, A-Aj, A-Aj, A+Aj, -A+Aj, A+Aj, A+Aj, A+Aj, A-Aj, A-Aj, -A+Aj, A-Aj, -A+Aj, A+Aj, A+Aj, -A+Aj, A+Aj, -A+Aj, A-Aj |
| 4 | A-Aj, A-Aj, -A+Aj, -A-Aj, -A-Aj, -A-Aj, -A-Aj, A-Aj, A+Aj, -A-Aj, A+Aj, -A-Aj, -A-Aj, -A+Aj, -A-Aj, -A+Aj, -A-Aj, A+Aj, -A+Aj, -A-Aj, A-Aj, A+Aj, A-Aj, A-Aj, A+Aj, A+Aj, A-Aj, -A-Aj, -A-Aj, -A+Aj, A-Aj, -A-Aj, A+Aj, -A-Aj, A-Aj, -A-Aj, A+Aj, A-Aj, A+Aj, A+Aj, -A-Aj, -A+Aj, A+Aj, A-Aj, -A+Aj, -A-Aj, A-Aj, -A+Aj, A+Aj, A-Aj, -A+Aj, -A-Aj, A-Aj, -A+Aj, A+Aj, -A+Aj, -A-Aj, -A-Aj, A-Aj, A-Aj, -A+Aj, -A+Aj, -A-Aj, A+Aj, A+Aj, -A+Aj, -A+Aj, -A-Aj, -A+Aj, A-Aj, A-Aj, A-Aj, A+Aj, -A+Aj, A+Aj, A+Aj, A+Aj, A-Aj, A-Aj, -A+Aj, A-Aj, -A+Aj, A+Aj, A+Aj, -A+Aj, A+Aj, -A+Aj |

**Table 27-4**

| Index | Pilot sequence |
|---|---|
| 1 | -A-Aj, -A-Aj, A+Aj, A-Aj, A-Aj, A-Aj, A-Aj, -A-Aj, -A+Aj, A-Aj, -A+Aj, A-Aj, A-Aj, A+Aj, A-Aj, A+Aj, A-Aj, -A+Aj, A+Aj, A-Aj, -A-Aj, -A+Aj, -A-Aj, -A-Aj, -A+Aj, -A+Aj, -A-Aj, A-Aj, A-Aj, A+Aj, -A-Aj, A-Aj, -A+Aj, A-Aj, -A-Aj, A-Aj, -A+Aj, -A-Aj, -A+Aj, -A+Aj, A-Aj, A+Aj, -A+Aj, -A-Aj, A+Aj, A-Aj, -A-Aj, A+Aj, -A+Aj, A+Aj, A-Aj, A-Aj, -A-Aj, A+Aj, A+Aj, A-Aj, -A+Aj, -A+Aj, A+Aj, A+Aj, A-Aj, A+Aj, -A-Aj, -A-Aj, -A-Aj, -A+Aj, A+Aj, -A+Aj, -A+Aj, -A+Aj, -A-Aj, -A-Aj, A+Aj, -A-Aj, A+Aj, -A+Aj, -A+Aj, A+Aj, -A+Aj, A+Aj |
| 2 | -A-Aj, A+Aj, A-Aj, A-Aj, A-Aj, A-Aj, -A-Aj, -A+Aj, A-Aj, -A+Aj, A-Aj, A-Aj, A+Aj, A-Aj, A+Aj, A-Aj, -A+Aj, A+Aj, A-Aj, -A-Aj, -A+Aj, -A-Aj, -A-Aj, -A+Aj, -A+Aj, -A-Aj, A-Aj, A-Aj, A+Aj, -A-Aj, A-Aj, -A+Aj, A-Aj, -A-Aj, A-Aj, -A+Aj, -A-Aj, -A+Aj, -A+Aj, A-Aj, A+Aj, -A+Aj, -A-Aj, A+Aj, A-Aj, -A-Aj, A+Aj, -A+Aj, A+Aj, A-Aj, A-Aj, -A-Aj, A+Aj, A+Aj, A-Aj, -A+Aj, -A+Aj, A+Aj, A+Aj, A-Aj, A+Aj, -A-Aj, -A-Aj, -A-Aj, -A+Aj, A+Aj, -A+Aj, -A+Aj, -A+Aj, -A-Aj, -A-Aj, A+Aj, -A-Aj, A+Aj, -A+Aj, -A+Aj, A+Aj, -A+Aj, A+Aj, -A-Aj |
| 3 | A+Aj, -A-Aj, -A+Aj, -A+Aj, -A+Aj, -A+Aj, A+Aj, A-Aj, -A+Aj, A-Aj, -A+Aj, -A+Aj, -A-Aj, -A+Aj, -A-Aj, - A+Aj, A-Aj, -A-Aj, -A+Aj, A+Aj, A-Aj, A+Aj, A+Aj, A-Aj, A-Aj, A+Aj, -A+Aj, -A+Aj, -A-Aj, A+Aj, -A+Aj, A-Aj, -A+Aj, A+Aj, -A+Aj, A-Aj, A+Aj, A-Aj, A-Aj, -A+Aj, -A-Aj, A-Aj, A+Aj, -A-Aj, -A+Aj, A+Aj, -A-Aj, A-Aj, - A-Aj, -A+Aj, -A+Aj, A+Aj, -A-Aj, -A-Aj, -A+Aj, A-Aj, A-Aj, -A-Aj, -A-Aj, -A+Aj, -A-Aj, A+Aj, A+Aj, A+Aj, A-Aj, -A-Aj, A-Aj, A-Aj, A-Aj, A+Aj, A+Aj, -A-Aj, A+Aj, -A-Aj, A-Aj, A-Aj, -A-Aj, A-Aj, -A-Aj, A+Aj |
| 4 | A+Aj, A+Aj, -A-Aj, -A+Aj, -A+Aj, -A+Aj, -A+Aj, A+Aj, A-Aj, -A+Aj, A-Aj, -A+Aj, -A+Aj, -A-Aj, -A+Aj, -A-Aj, -A+Aj, A-Aj, -A-Aj, -A+Aj, A+Aj, A-Aj, A+Aj, A+Aj, A-Aj, A-Aj, A+Aj, -A+Aj, -A+Aj, -A-Aj, A+Aj, -A+Aj, A-Aj, -A+Aj, A+Aj, -A+Aj, A-Aj, A+Aj, A-Aj, A-Aj, -A+Aj, -A-Aj, A-Aj, A+Aj, -A-Aj, -A+Aj, A+Aj, -A-Aj, A-Aj, -A-Aj, -A+Aj, -A+Aj, A+Aj, -A-Aj, -A-Aj, -A+Aj, A-Aj, A-Aj, -A-Aj, -A-Aj, -A+Aj, -A-Aj, A+Aj, A+Aj, A+Aj, A-Aj, -A-Aj, A-Aj, A-Aj, A-Aj, A+Aj, A+Aj. -A-Aj, A+Aj, -A-Aj, A-Aj, A-Aj, -A-Aj, A-Aj, -A-Aj |

**Table 27-5**

| Index | Pilot sequence |
|---|---|
| 1 | -A+Aj, -A-Aj, -A+Aj, -A-Aj, -A-Aj, -A+Aj, A-Aj, -A+Aj, A-Aj, A-Aj, -A-Aj, -A-Aj, -A-Aj, -A+Aj, -A-Aj, A-Aj, A-Aj, A-Aj, -A+Aj, A+Aj, -A+Aj, -A+Aj, -A-Aj, -A-Aj, A+Aj, -A+Aj, -A+Aj, A-Aj, A+Aj, A+Aj, -A+Aj, -A-Aj, - A+Aj, A-Aj, A+Aj, -A+Aj, A-Aj, -A-Aj, -A+Aj, A+Aj, -A-Aj, -A-Aj, A-Aj, -A-Aj, A+Aj, A-Aj, A+Aj, -A-Aj, A+Aj, A-Aj, -A+Aj, A+Aj, A+Aj, A-Aj, -A-Aj, -A-Aj, A-Aj, A-Aj, -A-Aj, A-Aj, A+Aj, -A+Aj, -A-Aj, A+Aj, - A+Aj, A+Aj, -A+Aj, A+Aj, A+Aj, -A-Aj, A+Aj, -A-Aj, A-Aj, A+Aj, A+Aj, A+Aj, A+Aj, -A+Aj, A-Aj, A-Aj |
| 2 | -A+Aj, A-Aj, A+Aj, A-Aj, A+Aj, A+Aj, A-Aj, -A+Aj, A-Aj, -A+Aj, -A+Aj, A+Aj, A+Aj, A+Aj, A-Aj, A+Aj, - A+Aj, -A+Aj, -A+Aj, A-Aj, -A-Aj, A-Aj, A-Aj, A+Aj, A+Aj, -A-Aj, A-Aj, A-Aj, -A+Aj, -A-Aj, -A-Aj, A-Aj, A+Aj, A-Aj, -A+Aj, -A-Aj, A-Aj, -A+Aj, A+Aj, A-Aj, -A-Aj, A+Aj, A+Aj, -A+Aj, A+Aj, -A-Aj, -A+Aj, -A-Aj, A+Aj, -A-Aj, -A+Aj, A-Aj, -A-Aj, -A-Aj, -A+Aj, A+Aj, A+Aj, -A+Aj, -A+Aj, A+Aj, -A+Aj, -A-Aj, A-Aj, A+Aj, - A-Aj, A-Aj, -A-Aj, A-Aj, -A-Aj, -A-Aj, A+Aj, -A-Aj, A+Aj, -A+Aj, -A-Aj, -A-Aj, -A-Aj, -A-Aj, A-Aj, -A+Aj |
| 3 | A-Aj, -A+Aj, -A-Aj, -A+Aj, -A-Aj, -A-Aj, -A+Aj, A-Aj, -A+Aj, A-Aj, A-Aj, -A-Aj, -A-Aj, -A-Aj, -A+Aj, -A-Aj, A-Aj, A-Aj, A-Aj, -A+Aj, A+Aj, -A+Aj, -A+Aj, -A-Aj, -A-Aj, A+Aj, -A+Aj, -A+Aj, A-Aj, A+Aj, A+Aj, -A+Aj, - A-Aj, -A+Aj, A-Aj, A+Aj, -A+Aj, A-Aj, -A-Aj, -A+Aj, A+Aj, -A-Aj, -A-Aj, A-Aj, -A-Aj, A+Aj, A-Aj, A+Aj, -A-Aj, A+Aj, A-Aj, -A+Aj, A+Aj, A+Aj, A-Aj, -A-Aj, -A-Aj, A-Aj, A-Aj, -A-Aj, A-Aj, A+Aj, -A+Aj, -A-Aj, A+Aj, - A+Aj, A+Aj, -A+Aj, A+Aj, A+Aj, -A-Aj, A+Aj, -A-Aj, A-Aj, A+Aj, A+Aj, A+Aj, A+Aj, -A+Aj, A-Aj |
| 4 | A-Aj, A+Aj, A-Aj, A+Aj, A+Aj, A-Aj, -A+Aj, A-Aj, -A+Aj, -A+Aj, A+Aj, A+Aj, A+Aj, A-Aj, A+Aj, -A+Aj, - A+Aj, -A+Aj, A-Aj, -A-Aj, A-Aj, A-Aj, A+Aj, A+Aj, -A-Aj, A-Aj, A-Aj, -A+Aj, -A-Aj, -A-Aj, A-Aj, A+Aj, A-Aj, -A+Aj, -A-Aj, A-Aj, -A+Aj, A+Aj, A-Aj, -A-Aj, A+Aj, A+Aj, -A+Aj, A+Aj, -A-Aj, -A+Aj, -A-Aj, A+Aj, -A-Aj, - A+Aj, A-Aj, -A-Aj, -A-Aj, -A+Aj, A+Aj, A+Aj, -A+Aj, -A+Aj, A+Aj, -A+Aj, -A-Aj, A-Aj, A+Aj, -A-Aj, A-Aj, - A-Aj, A-Aj, -A-Aj, -A-Aj, A+Aj, -A-Aj, A+Aj, -A+Aj, -A-Aj, -A-Aj, -A-Aj, -A-Aj, A-Aj, -A+Aj, -A+Aj |

**Table 27-6**

| Index | Pilot sequence |
|---|---|
| 1 | -A-Aj, -A+Aj, -A-Aj, -A+Aj, -A+Aj, -A-Aj, A+Aj, -A-Aj, A+Aj, A+Aj, -A+Aj, -A+Aj, -A+Aj, -A-Aj, -A+Aj, A+Aj, A+Aj, A+Aj, -A-Aj, A-Aj, -A-Aj, -A-Aj, -A+Aj, -A+Aj, A-Aj, -A-Aj, -A-Aj, A+Aj, A-Aj, A-Aj, -A-Aj, -A+Aj, -A-Aj, A+Aj, A-Aj, -A-Aj, A+Aj, -A+Aj, -A-Aj, A-Aj, -A+Aj, -A+Aj, A+Aj, -A+Aj, A-Aj, A+Aj, A-Aj, -A+Aj, A-Aj, A+Aj, -A-Aj, A-Aj, A-Aj, A+Aj, -A+Aj, -A+Aj, A+Aj, A+Aj, -A+Aj, A+Aj, A-Aj, -A-Aj, -A+Aj, A-Aj, -A-Aj, A-Aj, -A-Aj, A-Aj, A-Aj, -A+Aj, A-Aj, -A+Aj, A+Aj, A-Aj, A-Aj, A-Aj, A-Aj, -A-Aj, A+Aj, A+Aj |
| 2 | -A-Aj, A+Aj, A-Aj, A+Aj, A-Aj, A-Aj, A+Aj, -A-Aj, A+Aj, -A-Aj, -A-Aj, A-Aj, A-Aj, A-Aj, A+Aj, A-Aj, -A-Aj, -A-Aj, -A-Aj, A+Aj, -A+Aj, A+Aj, A+Aj, A-Aj, A-Aj, -A+Aj, A+Aj, A+Aj, -A-Aj, -A+Aj, -A+Aj, A+Aj, A-Aj, A+Aj, - A-Aj, -A+Aj, A+Aj, -A-Aj, A-Aj, A+Aj, -A+Aj, A-Aj, A-Aj, -A-Aj, A-Aj, -A+Aj, -A-Aj, -A+Aj, A-Aj, -A+Aj, -A-Aj, A+Aj, -A+Aj, -A+Aj, -A-Aj, A-Aj, A-Aj, -A-Aj, -A-Aj, A-Aj, -A-Aj, -A+Aj, A+Aj, A-Aj, -A+Aj, A+Aj, -A+Aj, A+Aj, -A+Aj, -A+Aj, A-Aj, -A+Aj, A-Aj, -A-Aj, -A+Aj, -A+Aj, -A+Aj, -A+Aj, A+Aj, -A-Aj |
| 3 | A+Aj, -A-Aj, -A+Aj, -A-Aj, -A+Aj, -A+Aj, -A-Aj, A+Aj, -A-Aj, A+Aj, A+Aj, -A+Aj, -A+Aj, -A+Aj, -A-Aj, -A+Aj, A+Aj, A+Aj, A+Aj, -A-Aj, A-Aj, -A-Aj, -A-Aj, -A+Aj, -A+Aj, A-Aj, -A-Aj, -A-Aj, A+Aj, A-Aj, A-Aj, -A-Aj, - A+Aj, -A-Aj, A+Aj, A-Aj, -A-Aj, A+Aj, -A+Aj, -A-Aj, A-Aj, -A+Aj, -A+Aj, A+Aj, -A+Aj, A-Aj, A+Aj, A-Aj, - A+Aj, A-Aj, A+Aj, -A-Aj, A-Aj, A-Aj, A+Aj, -A+Aj, -A+Aj, A+Aj, A+Aj, -A+Aj, A+Aj, A-Aj, -A-Aj, -A+Aj, A-Aj, -A-Aj, A-Aj, -A-Aj, A-Aj, A-Aj, -A+Aj, A-Aj, -A+Aj, A+Aj, A-Aj, A-Aj, A-Aj, A-Aj, -A-Aj, A+Aj |
| 4 | A+Aj, A-Aj, A+Aj, A-Aj, A-Aj, A+Aj, -A-Aj, A+Aj, -A-Aj, -A-Aj, A-Aj, A-Aj, A-Aj, A+Aj, A-Aj, -A-Aj, -A-Aj, -A-Aj, A+Aj, -A+Aj, A+Aj, A+Aj, A-Aj, A-Aj, -A+Aj, A+Aj, A+Aj, -A-Aj, -A+Aj, -A+Aj, A+Aj, A-Aj, A+Aj, -A-Aj, - A+Aj, A+Aj, -A-Aj, A-Aj, A+Aj, -A+Aj, A-Aj, A-Aj, -A-Aj, A-Aj, -A+Aj, -A-Aj, -A+Aj, A-Aj, -A+Aj, -A-Aj, A+Aj, -A+Aj, -A+Aj, -A-Aj, A-Aj, A-Aj, -A-Aj, -A-Aj, A-Aj, -A-Aj, -A+Aj, A+Aj, A-Aj, -A+Aj, A+Aj, -A+Aj, A+Aj, -A+Aj, -A+Aj, A-Aj, -A+Aj, A-Aj, -A-Aj, -A+Aj, -A+Aj, -A+Aj, -A+Aj, A+Aj, -A-Aj, -A-Aj |

(21) When $N_{PS}$ = 92, if a remainder of $N_{TS}$ divided by 4 is 1, the pilot sequence is one item in Table 28-1. Alternatively, any item is selected from Table 28-2 as a pilot sequence in one polarization direction, and any item is selected from Table 28-3 as a pilot sequence in the other polarization direction. Alternatively, any item is selected from Table 28-4 as a pilot sequence in one polarization direction, and any item is selected from Table 28-5 as a pilot sequence in the other polarization direction. If a remainder of $N_{TS}$ divided by 4 is 3, the pilot sequence is one item in Table 28-1 or Table 28-6. Alternatively, any item is selected from Table 28-2 as a pilot sequence in one polarization direction, and any item is selected from Table 28-3 as a pilot sequence in the other polarization direction. Alternatively, any item is selected from Table 28-4 as a pilot sequence in one polarization direction, and any item is selected from Table 28-5 as a pilot sequence in the other polarization direction.

**Table 28-1**

| Index | Polarization | Pilot sequence |
|---|---|---|
| 1 | Polarization 1 | -A-Aj, A-Aj, A+Aj, -A+Aj, A-Aj, A+Aj, A-Aj, -A-Aj, A+Aj, A+Aj, A-Aj, A+Aj, -A-Aj, -A+Aj, A-Aj, A+Aj, A-Aj, A-Aj, -A+Aj, -A+Aj, -A+Aj, -A+Aj, -A-Aj, -A-Aj, A+Aj, A+Aj, A-Aj, -A-Aj, -A-Aj, A-Aj, A+Aj, A+Aj, A-Aj, A+Aj, A+Aj, -A+Aj, -A+Aj, A-Aj, A-Aj, A-Aj, -A-Aj, A+Aj, -A+Aj, -A+Aj, A+Aj, A-Aj, -A+Aj, -A-Aj, A-Aj, A+Aj, -A+Aj, -A+Aj, A+Aj, -A+Aj, -A+Aj, A+Aj, A+Aj, A+Aj, -A+Aj, -A-Aj, -A+Aj, -A+Aj, -A+Aj, -A-Aj, -A+Aj, -A+Aj, A-Aj, -A-Aj, A-Aj, -A-Aj, A-Aj, -A-Aj, A+Aj, A-Aj, A-Aj, -A-Aj, -A-Aj, -A-Aj, -A-Aj, A+Aj, -A-Aj, A+Aj, -A+Aj, -A-Aj, -A-Aj, -A+Aj, A-Aj, -A-Aj, -A-Aj, A+Aj, A-Aj, A-Aj |
| | Polarization 2 | -A-Aj, A+Aj, A-Aj, -A+Aj, A-Aj, -A+Aj, A+Aj, A+Aj, -A+Aj, -A+Aj, -A-Aj, -A-Aj, -A-Aj, A+Aj, - A+Aj, -A+Aj, -A-Aj, A-Aj, A-Aj, -A+Aj, A-Aj, A+Aj, -A-Aj, A+Aj, A+Aj, -A+Aj, A-Aj, -A+Aj, -A+Aj, -A-Aj, -A+Aj, A+Aj, -A-Aj, A-Aj, -A+Aj, A-Aj, A-Aj, -A+Aj, A-Aj, A-Aj, A-Aj, A-Aj, -A+Aj, A+Aj, A-Aj, -A+Aj, A-Aj, -A-Aj, -A+Aj, A-Aj, A+Aj, A+Aj, -A-Aj, -A-Aj, A+Aj, A+Aj, -A+Aj, -A-Aj, A+Aj, A+Aj, A+Aj, A+Aj, A+Aj, -A+Aj, A+Aj, -A+Aj, A-Aj, -A-Aj, -A-Aj, -A+Aj, -A-Aj, -A-Aj, -A-Aj, A-Aj, A+Aj, -A-Aj, A-Aj, -A-Aj, A-Aj, -A+Aj, -A+Aj, A+Aj, -A-Aj, A-Aj, -A-Aj, -A-Aj, A+Aj, A+Aj, -A-Aj, A-Aj, A-Aj, -A+Aj |

(continued)

| Index | Polarization | Pilot sequence |
|---|---|---|
| 2 | Polarization 1 | -A-Aj, A-Aj, A+Aj, -A+Aj, A-Aj, A+Aj, A-Aj, -A-Aj, A+Aj, A+Aj, A-Aj, A+Aj, -A-Aj, -A+Aj, A-Aj, A+Aj, A-Aj, A-Aj, -A+Aj, -A+Aj, -A+Aj, -A+Aj, -A-Aj, -A-Aj, A+Aj, A+Aj, A-Aj, -A-Aj, -A-Aj, A-Aj, A+Aj, A+Aj, A-Aj, A+Aj, A+Aj, -A+Aj, -A+Aj, A-Aj, A-Aj, A-Aj, -A-Aj, A+Aj, -A+Aj, -A+Aj, A+Aj, A-Aj, -A+Aj, -A-Aj, A-Aj, A+Aj, -A+Aj, -A+Aj, A+Aj, -A+Aj, -A+Aj, A+Aj, A+Aj, A+Aj, -A+Aj, -A-Aj, -A+Aj, -A+Aj, -A+Aj, -A-Aj, -A+Aj, -A+Aj, A-Aj, -A-Aj, A-Aj, -A-Aj, A-Aj, -A-Aj, A+Aj, A-Aj, A-Aj, -A-Aj, -A-Aj, -A-Aj, -A-Aj, A+Aj, -A-Aj, A+Aj, -A+Aj, -A-Aj, -A-Aj, -A+Aj, A-Aj, -A-Aj, -A-Aj, A+Aj, A-Aj, A-Aj |
| | Polarization 2 | -A+Aj, -A-Aj, A+Aj, A-Aj, -A+Aj, A-Aj, -A+Aj, A+Aj, A+Aj, -A+Aj, -A+Aj, -A-Aj, -A-Aj, -A-Aj, A+Aj, -A+Aj, -A+Aj, -A-Aj, A-Aj, A-Aj, -A+Aj, A-Aj, A+Aj, -A-Aj, A+Aj, A+Aj, -A+Aj, A-Aj, -A+Aj, -A+Aj, -A-Aj, -A+Aj, A+Aj, -A-Aj, A-Aj, -A+Aj, A-Aj, A-Aj, -A+Aj, A-Aj, A-Aj, A-Aj, A-Aj, -A+Aj, A+Aj, A-Aj, -A+Aj, A-Aj, -A-Aj, -A+Aj, A-Aj, A+Aj, A+Aj, -A-Aj, -A-Aj, A+Aj, A+Aj, -A+Aj, -A-Aj, A+Aj, A+Aj, A+Aj, A+Aj, A+Aj, -A+Aj, A+Aj, -A+Aj, A-Aj, -A-Aj, -A-Aj, -A+Aj, -A-Aj, -A-Aj, -A-Aj, A-Aj, A+Aj, -A-Aj, A-Aj, -A-Aj, A-Aj, -A+Aj, -A+Aj, A+Aj, -A-Aj, A-Aj, -A-Aj, -A-Aj, A+Aj, A+Aj, -A-Aj, A-Aj, A-Aj |
| 3 | Polarization 1 | -A+Aj, -A+Aj, -A-Aj, A+Aj, A+Aj, -A-Aj, -A-Aj, -A+Aj, -A-Aj, A+Aj, A-Aj, A-Aj, -A+Aj, -A-Aj, -A+Aj, -A-Aj, A+Aj, -A+Aj, -A-Aj, -A-Aj, -A-Aj, A-Aj, -A-Aj, -A-Aj, -A+Aj, A-Aj, A+Aj, A-Aj, A+Aj, A+Aj, A+Aj, A+Aj, A+Aj, -A-Aj, A-Aj, A+Aj, A+Aj, -A-Aj, -A-Aj, A+Aj, A+Aj, -A+Aj, A-Aj, -A-Aj, - A+Aj, A-Aj, -A+Aj, A+Aj, A-Aj, -A+Aj, -A+Aj, -A+Aj, -A+Aj, A-Aj, -A+Aj, -A+Aj, A-Aj, -A+Aj, -A-Aj, A+Aj, A-Aj, -A-Aj, A-Aj, A-Aj, -A+Aj, A-Aj, A+Aj, A+Aj, -A-Aj, A+Aj, -A+Aj, A-Aj, -A+Aj, - A+Aj, -A-Aj, A-Aj, A-Aj, A+Aj, -A-Aj, -A-Aj, -A-Aj, A-Aj, A-Aj, A+Aj, A+Aj, A-Aj, -A+Aj, A-Aj, - A+Aj, A+Aj, -A-Aj, A-Aj |
| | Polarization 2 | -A+Aj, -A+Aj, A+Aj, -A-Aj, -A-Aj, -A+Aj, A-Aj, -A-Aj, -A-Aj, A-Aj, A+Aj, -A-Aj, A+Aj, -A-Aj, -A-Aj, -A-Aj, -A-Aj, -A+Aj, -A+Aj, A+Aj, -A-Aj, -A+Aj, -A-Aj, -A+Aj, -A-Aj, -A+Aj, A-Aj, A-Aj, -A-Aj, A-Aj, A-Aj, A-Aj, -A-Aj, A-Aj, A+Aj. A+Aj, A+Aj, A-Aj, A-Aj, A+Aj, A-Aj, A-Aj, A+Aj, -A+Aj, -A-Aj, A-Aj, -A+Aj, A+Aj, A-Aj, A-Aj, A+Aj, -A-Aj, -A+Aj, -A+Aj, -A+Aj, A-Aj, A-Aj, A+Aj, A+Aj, - A+Aj, A+Aj, A+Aj, -A+Aj, -A-Aj, -A-Aj, -A+Aj, A+Aj, A+Aj, -A-Aj, -A-Aj, A-Aj, A-Aj, A-Aj, A-Aj, - A+Aj, -A+Aj, A+Aj, -A+Aj, A-Aj, -A-Aj, A+Aj, -A+Aj, A+Aj, A+Aj, -A-Aj, -A+Aj, A+Aj, -A+Aj, A-Aj, A+Aj, -A+Aj, -A-Aj |
| 4 | Polarization 1 | -A+Aj, -A+Aj, A+Aj, -A-Aj, -A-Aj, -A+Aj, A-Aj, -A-Aj, -A-Aj, A-Aj, A+Aj, -A-Aj, A+Aj, -A-Aj, -A-Aj, -A-Aj, -A-Aj, -A+Aj, -A+Aj, A+Aj, -A-Aj, -A+Aj, -A-Aj, -A+Aj, -A-Aj, -A+Aj, A-Aj, A-Aj, -A-Aj, A-Aj, A-Aj, A-Aj, -A-Aj, A-Aj, A+Aj. A+Aj, A+Aj, A-Aj, A-Aj, A+Aj, A-Aj, A-Aj, A+Aj, -A+Aj, -A-Aj, A-Aj, -A+Aj, A+Aj, A-Aj, A-Aj, A+Aj, -A-Aj, -A+Aj, -A+Aj, -A+Aj, A-Aj, A-Aj, A+Aj, A+Aj, - A+Aj, A+Aj, A+Aj, -A+Aj, -A-Aj, -A-Aj, -A+Aj, A+Aj, A+Aj, -A-Aj, -A-Aj, A-Aj, A-Aj, A-Aj, A-Aj, - A+Aj, -A+Aj, A+Aj, -A+Aj, A-Aj, -A-Aj, A+Aj, -A+Aj, A+Aj, A+Aj, -A-Aj, -A+Aj, A+Aj, -A+Aj, A-Aj, A+Aj, -A+Aj, -A-Aj |
| | Polarization 2 | A-Aj, -A+Aj, -A+Aj, -A-Aj, A+Aj, A+Aj, -A-Aj, -A-Aj, -A+Aj, -A-Aj, A+Aj, A-Aj, A-Aj, -A+Aj, -A-Aj, -A+Aj, -A-Aj, A+Aj, -A+Aj, -A-Aj, -A-Aj, -A-Aj, A-Aj, -A-Aj, -A-Aj, -A+Aj, A-Aj, A+Aj, A-Aj, A+Aj, A+Aj, A+Aj, A+Aj, A+Aj, -A-Aj, A-Aj, A+Aj, A+Aj, -A-Aj, -A-Aj, A+Aj, A+Aj, -A+Aj, A-Aj, - A-Aj, -A+Aj, A-Aj, -A+Aj, A+Aj, A-Aj, -A+Aj, -A+Aj, -A+Aj, -A+Aj, A-Aj, -A+Aj, -A+Aj, A-Aj, - A+Aj, -A-Aj, A+Aj, A-Aj, -A-Aj, A-Aj, A-Aj, -A+Aj, A-Aj, A+Aj, A+Aj, -A-Aj, A+Aj, -A+Aj, A-Aj, - A+Aj, -A+Aj, -A-Aj, A-Aj, A-Aj, A+Aj, -A-Aj, -A-Aj, -A-Aj, A-Aj, A-Aj, A+Aj, A+Aj, A-Aj, -A+Aj, A-Aj, -A+Aj, A+Aj, -A-Aj |

**Table 28-2**

| Index | Pilot sequence |
|---|---|
| 1 | -A-Aj, A+Aj, -A-Aj, -A+Aj, -A-Aj, -A-Aj, A-Aj, -A+Aj, -A-Aj, -A+Aj, -A-Aj, A-Aj, A+Aj, -A-Aj, -A-Aj, A-Aj, A+Aj, -A+Aj, -A-Aj, -A-Aj, -A+Aj, -A-Aj, A+Aj, A+Aj, A-Aj, A-Aj, A+Aj, -A-Aj, A-Aj, A+Aj, A-Aj, -A+Aj, A+Aj, A+Aj, A-Aj, A+Aj, A+Aj, A-Aj, -A-Aj, A-Aj, -A+Aj, A-Aj, -A-Aj, -A+Aj, A-Aj, -A-Aj, A+Aj, A+Aj, - A+Aj, A+Aj, -A-Aj, A-Aj, -A-Aj, A+Aj, A-Aj, -A+Aj, -A+Aj, A-Aj, A+Aj, A+Aj, -A-Aj, -A+Aj, A+Aj, -A+Aj, - A+Aj, A+Aj, A-Aj, -A+Aj, -A-Aj, A-Aj, -A+Aj, -A+Aj, -A+Aj, A-Aj, -A-Aj, A-Aj, A+Aj, A+Aj, -A+Aj, -A+Aj, - A+Aj, A+Aj, -A-Aj, -A-Aj, -A+Aj, A-Aj, A-Aj, A-Aj, A-Aj, -A+Aj, -A-Aj, A+Aj |

137

(continued)

| Index | Pilot sequence |
|---|---|
| 2 | -A-Aj, A+Aj, -A-Aj, A+Aj, A-Aj, A+Aj, A+Aj, -A+Aj, A-Aj, A+Aj, A-Aj, A+Aj, -A+Aj, -A-Aj, A+Aj, A+Aj, - A+Aj, -A-Aj, A-Aj, A+Aj, A+Aj, A-Aj, A+Aj, -A-Aj, -A-Aj, -A+Aj, -A+Aj, -A-Aj, A+Aj, -A+Aj, -A-Aj, -A+Aj, A-Aj, -A-Aj, -A-Aj, -A+Aj, -A-Aj, -A-Aj, -A+Aj, A+Aj, -A+Aj, A-Aj, -A+Aj, A+Aj, A-Aj, -A+Aj, A+Aj, -A-Aj, - A-Aj, A-Aj, -A-Aj, A+Aj, -A+Aj, A+Aj, -A-Aj, -A+Aj, A-Aj, A-Aj, -A+Aj, -A-Aj, -A-Aj, A+Aj, A-Aj, -A-Aj, A-Aj, A-Aj, -A-Aj, -A+Aj, -A-Aj, A+Aj, -A+Aj, A-Aj, A-Aj, A-Aj, -A+Aj, A+Aj, -A+Aj, -A-Aj, -A-Aj, A-Aj, A-Aj, A-Aj, -A-Aj, A+Aj, A+Aj, A-Aj, -A+Aj, -A+Aj, -A+Aj, -A+Aj, A-Aj, A+Aj |
| 3 | A+Aj, -A-Aj, A+Aj, -A-Aj, -A+Aj, -A-Aj, -A-Aj, A-Aj, -A+Aj, -A-Aj, -A+Aj, -A-Aj, A-Aj, A+Aj, -A-Aj, -A-Aj, A-Aj, A+Aj, -A+Aj, -A-Aj, -A-Aj, -A+Aj, -A-Aj, A+Aj, A+Aj, A-Aj, A-Aj, A+Aj, -A-Aj, A-Aj, A+Aj, A-Aj, - A+Aj, A+Aj, A+Aj, A-Aj, A+Aj, A+Aj, A-Aj, -A-Aj, A-Aj, -A+Aj, A-Aj, -A-Aj, -A+Aj, A-Aj, -A-Aj, A+Aj, A+Aj, -A+Aj, A+Aj, -A-Aj, A-Aj, -A-Aj, A+Aj, A-Aj, -A+Aj, -A+Aj, A-Aj, A+Aj, A+Aj, -A-Aj, -A+Aj, A+Aj, -A+Aj, - A+Aj, A+Aj, A-Aj, -A+Aj, -A-Aj, A-Aj, -A+Aj, -A+Aj, -A+Aj, A-Aj, -A-Aj, A-Aj, A+Aj, A+Aj, -A+Aj, -A+Aj, - A+Aj, A+Aj, -A-Aj, -A-Aj, -A+Aj, A-Aj, A-Aj, A-Aj, A-Aj, -A+Aj, -A-Aj |
| 4 | A+Aj, -A-Aj, A+Aj, A-Aj, A+Aj, A+Aj, -A+Aj, A-Aj, A+Aj, A-Aj, A+Aj, -A+Aj, -A-Aj, A+Aj, A+Aj, -A+Aj, -A-Aj, A-Aj, A+Aj, A+Aj, A-Aj, A+Aj, -A-Aj, -A-Aj, -A+Aj, -A+Aj, -A-Aj, A+Aj, -A+Aj, -A-Aj, -A+Aj, A-Aj, -A-Aj, -A-Aj, -A+Aj, -A-Aj, -A-Aj, -A+Aj, A+Aj, -A+Aj, A-Aj, -A+Aj, A+Aj, A-Aj, -A+Aj, A+Aj, -A-Aj, -A-Aj, A-Aj, -A-Aj, A+Aj, -A+Aj, A+Aj, -A-Aj, -A+Aj, A-Aj, A-Aj, -A+Aj, -A-Aj, -A-Aj, A+Aj, A-Aj, -A-Aj, A-Aj, A-Aj, - A-Aj, -A+Aj, A-Aj, A+Aj, -A+Aj, A-Aj, A-Aj, A-Aj, -A+Aj, A+Aj, -A+Aj, -A-Aj, -A-Aj, A-Aj, A-Aj, A-Aj, -A-Aj, A+Aj, A+Aj, A-Aj, -A+Aj, -A+Aj, -A+Aj, -A+Aj, A-Aj, A+Aj, -A-Aj |

**Table 28-3**

| Index | Pilot sequence |
|---|---|
| 1 | -A+Aj, A-Aj, -A+Aj, -A-Aj, -A+Aj, -A+Aj, A+Aj, -A-Aj, -A+Aj, -A-Aj, -A+Aj, A+Aj, A-Aj, -A+Aj, -A+Aj, A+Aj, A-Aj, -A-Aj, -A+Aj, -A+Aj, -A-Aj, -A+Aj, A-Aj, A-Aj, A+Aj, A+Aj, A-Aj, -A+Aj, A+Aj, A-Aj, A+Aj, -A-Aj, A-Aj, A-Aj, A+Aj, A-Aj, A-Aj, A+Aj, -A+Aj, A+Aj, -A-Aj, A+Aj, -A+Aj, -A-Aj, A+Aj, -A+Aj, A-Aj, A-Aj, -A-Aj, A-Aj, - A+Aj, A+Aj, -A+Aj, A-Aj, A+Aj, -A-Aj, -A-Aj, A+Aj, A-Aj, A-Aj, -A+Aj, -A-Aj, A-Aj, -A-Aj, -A-Aj, A-Aj, A+Aj, - A-Aj, -A+Aj, A+Aj, -A-Aj, -A-Aj, -A-Aj, A+Aj, -A+Aj, A+Aj, A-Aj, A-Aj, -A-Aj, -A-Aj, -A-Aj, A-Aj, -A+Aj, -A+Aj, -A-Aj, A+Aj, A+Aj, A+Aj, A+Aj, -A-Aj, -A+Aj, A-Aj |
| 2 | -A+Aj, A-Aj, -A+Aj, A-Aj, A+Aj, A-Aj, A-Aj, -A-Aj. A+Aj, A-Aj, A+Aj, A-Aj, -A-Aj, -A+Aj, A-Aj, A-Aj, -A-Aj, - A+Aj, A+Aj, A-Aj, A-Aj, A+Aj, A-Aj, -A+Aj, -A+Aj, -A-Aj, -A-Aj, -A+Aj, A-Aj, -A-Aj, -A+Aj, -A-Aj, A+Aj, - A+Aj, -A+Aj, -A-Aj, -A+Aj, -A+Aj, -A-Aj, A-Aj, -A-Aj, A+Aj, -A-Aj, A-Aj, A+Aj, -A-Aj, A-Aj, -A+Aj, -A+Aj, A+Aj, -A+Aj, A-Aj, -A-Aj, A-Aj, -A+Aj, -A-Aj, A+Aj, A+Aj, -A-Aj, -A+Aj, -A+Aj, A-Aj, A+Aj, -A+Aj, A+Aj, A+Aj, -A+Aj, -A-Aj, A+Aj, A-Aj, -A-Aj, A+Aj, A+Aj, A+Aj, -A-Aj, A-Aj, -A-Aj, -A+Aj, -A+Aj, A+Aj, A+Aj, A+Aj, -A+Aj, A-Aj, A-Aj, A+Aj, -A-Aj, -A-Aj, -A-Aj, -A-Aj, A+Aj, A-Aj |
| 3 | A-Aj, -A+Aj, A-Aj, -A+Aj, -A-Aj, -A+Aj, -A+Aj, A+Aj, -A-Aj, -A+Aj, -A-Aj, -A+Aj, A+Aj, A-Aj, -A+Aj, -A+Aj, A+Aj, A-Aj, -A-Aj, -A+Aj, -A+Aj, -A-Aj, -A+Aj, A-Aj, A-Aj, A+Aj, A+Aj, A-Aj, -A+Aj, A+Aj, A-Aj, A+Aj, -A-Aj, A-Aj, A-Aj, A+Aj, A-Aj, A-Aj, A+Aj, -A+Aj, A+Aj, -A-Aj, A+Aj, -A+Aj, -A-Aj, A+Aj, -A+Aj, A-Aj, A-Aj, -A-Aj, A- Aj, -A+Aj, A+Aj, -A+Aj, A-Aj, A+Aj, -A-Aj, -A-Aj, A+Aj, A-Aj, A-Aj, -A+Aj, -A-Aj, A-Aj, -A-Aj, -A-Aj, A-Aj, A+Aj, -A-Aj, -A+Aj, A+Aj, -A-Aj, -A-Aj, -A-Aj, A+Aj, -A+Aj, A+Aj, A-Aj, A-Aj, -A-Aj, -A-Aj, -A-Aj, A-Aj, -A+Aj, -A+Aj, -A-Aj, A+Aj, A+Aj, A+Aj, A+Aj, -A-Aj, -A+Aj |
| 4 | A-Aj, -A+Aj, A-Aj, A+Aj, A-Aj, A-Aj, -A-Aj, A+Aj, A-Aj, A+Aj, A-Aj, -A-Aj, -A+Aj, A-Aj, A-Aj, -A-Aj, -A+Aj, A+Aj, A-Aj, A-Aj, A+Aj, A-Aj, -A+Aj, -A+Aj, -A-Aj, -A-Aj, -A+Aj, A-Aj, -A-Aj, -A+Aj, -A-Aj, A+Aj, -A+Aj, - A+Aj, -A-Aj, -A+Aj, -A+Aj, -A-Aj, A-Aj, -A-Aj, A+Aj, -A-Aj, A-Aj, A+Aj, -A-Aj, A-Aj, -A+Aj, -A+Aj, A+Aj, - A+Aj, A-Aj, -A-Aj, A-Aj, -A+Aj, -A-Aj, A+Aj, A+Aj, -A-Aj, -A+Aj, -A+Aj, A-Aj, A+Aj, -A+Aj, A+Aj, A+Aj, - A+Aj, -A-Aj, A+Aj, A-Aj, -A-Aj, A+Aj, A+Aj, A+Aj, -A-Aj, A-Aj, -A-Aj, -A+Aj, -A+Aj, A+Aj, A+Aj, A+Aj, -A+Aj, A-Aj, A-Aj, A+Aj, -A-Aj, -A-Aj, -A-Aj, -A-Aj, A+Aj, A-Aj, -A+Aj |

**Table 28-4**

| Index | Pilot sequence |
|---|---|
| 1 | -A-Aj, A-Aj, -A+Aj, -A+Aj, -A+Aj, -A+Aj, A-Aj, -A-Aj, -A-Aj, A+Aj, A-Aj, A-Aj, A-Aj, A+Aj, A+Aj, -A+Aj, - A-Aj, -A+Aj, A-Aj, A-Aj, A-Aj, -A+Aj, -A-Aj, A-Aj, -A+Aj, A+Aj, A-Aj, A-Aj, A+Aj, A-Aj, -A-Aj, A+Aj, A+Aj, -A+Aj, A-Aj, A-Aj, -A+Aj, A+Aj, -A-Aj, -A+Aj, -A-Aj, A+Aj, A-Aj, A+Aj, A+Aj, -A-Aj, -A+Aj, A-Aj, - A-Aj, -A+Aj, A-Aj, -A+Aj, -A-Aj, -A+Aj, A+Aj. A+Aj, -A+Aj, A+Aj, A+Aj, A-Aj, -A+Aj, A+Aj, -A+Aj, -A-Aj, A+Aj, -A+Aj, -A+Aj, A+Aj, A+Aj, -A-Aj, A-Aj, -A-Aj, -A-Aj, A-Aj, A+Aj, -A+Aj, -A-Aj, -A-Aj, A+Aj, -A+Aj, -A-Aj, A-Aj, -A-Aj, A-Aj, -A+Aj, -A-Aj, -A-Aj, A-Aj, -A-Aj, A+Aj, -A-Aj, A+Aj |
| 2 | -A-Aj, A+Aj, -A+Aj, A-Aj, A-Aj, A-Aj, A-Aj, -A+Aj, A+Aj, A+Aj, -A-Aj, -A+Aj, -A+Aj, -A+Aj, -A-Aj, -A-Aj, A-Aj, A+Aj, A-Aj, -A+Aj, -A+Aj, -A+Aj, A-Aj, A+Aj, -A+Aj, A-Aj, -A-Aj, -A+Aj, -A+Aj, -A-Aj, -A+Aj, A+Aj, -A-Aj, -A- Aj, A-Aj, -A+Aj, -A+Aj, A-Aj, -A-Aj, A+Aj, A-Aj, A+Aj, -A-Aj, -A+Aj, -A-Aj, -A-Aj, A+Aj, A-Aj, - A+Aj, A+Aj, A- Aj, -A+Aj, A-Aj, A+Aj, A-Aj, -A-Aj, -A-Aj, A-Aj, -A-Aj, -A-Aj, -A+Aj, A-Aj, -A-Aj, A-Aj, A+Aj, -A-Aj, A-Aj, A-Aj, -A-Aj, -A-Aj, A+Aj, -A+Aj, A+Aj, A+Aj, -A+Aj, -A-Aj, A-Aj, A+Aj, A+Aj, -A-Aj, A-Aj, A+Aj, -A+Aj, A+Aj, -A+Aj, A-Aj, A+Aj, A+Aj, -A+Aj, A+Aj, -A-Aj, A+Aj |
| 3 | A+Aj, -A-Aj, A-Aj, -A+Aj, -A+Aj, -A+Aj, -A+Aj, A-Aj, -A-Aj, -A-Aj, A+Aj, A-Aj, A-Aj, A-Aj, A+Aj, A+Aj, - A+Aj, -A-Aj, -A+Aj, A-Aj, A-Aj, A-Aj, -A+Aj, -A-Aj, A-Aj, -A+Aj, A+Aj, A-Aj, A-Aj, A+Aj, A-Aj, -A-Aj, A+Aj, A+Aj, -A+Aj, A-Aj, A-Aj, -A+Aj, A+Aj, -A-Aj, -A+Aj, -A-Aj, A+Aj, A-Aj, A+Aj, A+Aj, -A-Aj, -A+Aj, A-Aj, -A-Aj, -A+Aj, A-Aj, -A+Aj, -A-Aj, -A+Aj, A+Aj, A+Aj, -A+Aj, A+Aj, A+Aj, A-Aj, -A+Aj, A+Aj, -A+Aj, -A-Aj, A+Aj, -A+Aj, -A+Aj, A+Aj, A+Aj, A-Aj, A-Aj, -A-Aj, -A-Aj, A-Aj, A+Aj, -A+Aj, -A-Aj, -A-Aj, A+Aj, - A+Aj, -A-Aj, A-Aj, -A-Aj, A-Aj, -A+Aj, -A-Aj, -A-Aj, A-Aj, -A-Aj, A+Aj, -A-Aj |
| 4 | A+Aj, -A+Aj, A-Aj, A-Aj, A-Aj, A-Aj, -A+Aj, A+Aj, A+Aj, -A-Aj, -A+Aj, -A+Aj, -A+Aj, -A-Aj, -A-Aj, A-Aj, A+Aj, A-Aj, -A+Aj, -A+Aj, -A+Aj, A-Aj, A+Aj, -A+Aj, A-Aj, -A-Aj, -A+Aj, -A+Aj, -A-Aj, -A+Aj, A+Aj, -A-Aj, -A-Aj, A- Aj, -A+Aj, -A+Aj, A-Aj, -A-Aj, A+Aj, A-Aj, A+Aj, -A-Aj, -A+Aj, -A-Aj, -A-Aj, A+Aj, A-Aj, - A+Aj, A+Aj, A-Aj, -A+Aj, A-Aj, A+Aj, A-Aj, -A-Aj, -A-Aj, A-Aj, -A-Aj, -A-Aj, -A+Aj, A-Aj, -A-Aj, A-Aj, A+Aj, -A-Aj, A-Aj, A-Aj, -A- Aj, -A-Aj, A+Aj, -A+Aj, A+Aj, A+Aj, -A+Aj, -A-Aj, A-Aj, A+Aj, A+Aj, -A-Aj, A-Aj, A+Aj, -A+Aj, A+Aj, -A+Aj, A- Aj, A+Aj, A+Aj, -A+Aj, A+Aj, -A-Aj, A+Aj, -A-Aj |

**Table 28-5**

| Index | Pilot sequence |
|---|---|
| 1 | -A+Aj, A-Aj, -A-Aj, A+Aj, A+Aj, A+Aj, A+Aj, -A-Aj, A-Aj, A-Aj, -A+Aj, -A-Aj, -A-Aj, -A-Aj, -A+Aj, -A+Aj, A+Aj, A-Aj, A+Aj, -A-Aj, -A-Aj, -A-Aj, A+Aj, A-Aj, -A-Aj, A+Aj, -A+Aj, -A-Aj, -A-Aj, -A+Aj, -A-Aj, A-Aj, - A+Aj, -A+Aj, A+Aj, -A-Aj, -A-Aj, A+Aj, -A+Aj, A-Aj, A+Aj, A-Aj, -A+Aj, -A-Aj, -A+Aj, -A+Aj, A-Aj, A+Aj, -A-Aj, A-Aj, A+Aj, -A-Aj, A+Aj, A-Aj, A+Aj, -A+Aj, -A+Aj, A+Aj, -A+Aj, -A+Aj, -A-Aj, A+Aj, -A+Aj, A+Aj, A-Aj, -A+Aj, A+Aj, A+Aj, -A+Aj, -A+Aj, A-Aj, -A-Aj, A-Aj, A-Aj, -A-Aj, -A+Aj, A+Aj, A-Aj, A-Aj, -A+Aj, A+Aj, A-Aj, -A-Aj, A- Aj, -A-Aj, A+Aj, A-Aj, A-Aj, -A-Aj, A-Aj, -A+Aj, A-Aj |
| 2 | -A+Aj, A+Aj, -A-Aj, -A-Aj, -A-Aj, -A-Aj, A+Aj, -A+Aj, -A+Aj, A-Aj, A+Aj, A+Aj, A+Aj, A-Aj, A-Aj, -A-Aj, - A+Aj, -A-Aj, A+Aj, A+Aj, A+Aj, -A-Aj, -A+Aj, A+Aj, -A-Aj, A-Aj, A+Aj, A+Aj, A-Aj, A+Aj, -A+Aj, A-Aj, A-Aj, -A-Aj, A+Aj, A+Aj, -A-Aj, A-Aj, -A+Aj, -A-Aj, -A+Aj, A-Aj, A+Aj, A-Aj, A-Aj, -A+Aj, -A-Aj, A+Aj, - A+Aj, -A-Aj, A+Aj, -A-Aj, -A+Aj, -A-Aj, A-Aj, A-Aj, -A-Aj, A-Aj, A-Aj, A+Aj, -A-Aj, A-Aj, -A-Aj, -A+Aj, A-Aj, -A-Aj, -A-Aj, A-Aj, A- Aj, -A+Aj, A+Aj, -A+Aj, -A+Aj, A+Aj, A-Aj, -A-Aj, -A+Aj, -A+Aj, A-Aj, -A-Aj, - A+Aj, A+Aj, -A+Aj, A+Aj, -A-Aj, -A+Aj, -A+Aj, A+Aj, -A+Aj, A-Aj, -A+Aj, A-Aj |
| 3 | A-Aj, -A-Aj, A+Aj, A+Aj, A+Aj, A+Aj, -A-Aj, A-Aj, A-Aj, -A+Aj, -A-Aj, -A-Aj, -A-Aj, -A+Aj, -A+Aj, A+Aj, A-Aj, A+Aj, -A-Aj, -A-Aj, -A-Aj, A+Aj, A-Aj, -A-Aj, A+Aj, -A+Aj, -A-Aj, -A-Aj, -A+Aj, -A-Aj, A-Aj, -A+Aj, - A+Aj, A+Aj, -A-Aj, -A-Aj, A+Aj, -A+Aj, A-Aj. A+Aj, A-Aj, -A+Aj, -A-Aj, -A+Aj, -A+Aj, A-Aj, A+Aj, -A-Aj, A-Aj, A+Aj, -A-Aj, A+Aj, A-Aj, A+Aj, -A+Aj, -A+Aj, A+Aj, -A+Aj, -A+Aj, -A-Aj, A+Aj, -A+Aj, A+Aj, A-Aj, - A+Aj, A+Aj, A+Aj, -A+Aj, -A+Aj, A-Aj, -A-Aj, A-Aj, A-Aj, -A-Aj, -A+Aj, A+Aj, A-Aj, A-Aj, -A+Aj, A+Aj, A-Aj, -A-Aj, A-Aj, -A-Aj, A+Aj, A-Aj, A-Aj, -A-Aj, A-Aj, -A+Aj, A-Aj, -A+Aj |
| 4 | A-Aj, -A+Aj, A+Aj, -A-Aj, -A-Aj, -A-Aj, -A-Aj, A+Aj, -A+Aj, -A+Aj, A-Aj, A+Aj, A+Aj, A+Aj, A-Aj, A-Aj, - A-Aj, -A+Aj, -A-Aj, A+Aj, A+Aj, A+Aj, -A-Aj. -A+Aj, A+Aj, -A-Aj, A-Aj, A+Aj, A+Aj, A-Aj, A+Aj, -A+Aj, A-Aj, A-Aj, -A-Aj, A+Aj, A+Aj, A-Aj, A-Aj, -A+Aj, -A-Aj, -A+Aj, A-Aj, A+Aj, A-Aj, A-Aj, -A+Aj, -A-Aj, A+Aj, -A+Aj, -A-Aj, A+Aj, -A-Aj, -A+Aj, -A-Aj, A-Aj, A-Aj, -A-Aj, A-Aj, A-Aj, A+Aj, -A-Aj, A-Aj, -A-Aj, - A+Aj, A-Aj, -A-Aj, -A-Aj, A- Aj, A-Aj, -A+Aj, A+Aj, -A+Aj, -A+Aj, A+Aj, A-Aj, -A-Aj, -A+Aj, -A+Aj, A-Aj, - A-Aj, -A+Aj, A+Aj, -A+Aj, A+Aj, -A-Aj, -A+Aj, -A+Aj, A+Aj, -A+Aj, A-Aj, -A+Aj |

**Table 28-6**

| Index | Polarization | Pilot sequence |
|---|---|---|
| 1 | Polarization 1 | -A-Aj, -A-Aj, -A-Aj, A+Aj, -A+Aj, A+Aj, A-Aj, A+Aj, -A+Aj, A-Aj, A-Aj, A-Aj, A+Aj, A-Aj, -A-Aj, -A-Aj, A+Aj, A-Aj, -A-Aj, A+Aj, -A-Aj, A+Aj, A+Aj, -A+Aj, -A+Aj, -A-Aj, -A-Aj, A-Aj, A+Aj, A-Aj, A+Aj, A+Aj, A-Aj, -A+Aj, A-Aj, A-Aj, A+Aj, -A-Aj, -A-Aj, A+Aj, A+Aj, A+Aj, - A+Aj, A+Aj, -A-Aj, A+Aj, A-Aj, A-Aj, A+Aj, A+Aj, A+Aj, A-Aj, -A-Aj, -A+Aj, -A-Aj, -A-Aj, A+Aj, -A-Aj, -A-Aj, -A-Aj, -A-Aj, A-Aj, A-Aj, -A+Aj, -A+Aj, -A-Aj, -A+Aj, -A+Aj, -A+Aj, - A+Aj, -A-Aj, A+Aj, -A+Aj, A-Aj, -A+Aj, -A+Aj, A-Aj, -A+Aj, A-Aj, -A+Aj, -A-Aj, -A+Aj, A+Aj, -A+Aj, A-Aj, -A-Aj, A-Aj, -A-Aj, A-Aj, -A+Aj, -A+Aj, A+Aj |
| 1 | Polarization 2 | -A+Aj, -A+Aj, -A+Aj, A-Aj, -A-Aj, A-Aj, A+Aj, A-Aj, -A-Aj, A+Aj, A+Aj, A+Aj, A-Aj, A+Aj, - A+Aj, -A+Aj, A-Aj, A+Aj, -A+Aj, A-Aj, -A+Aj, A-Aj, A-Aj, -A-Aj, -A-Aj, -A+Aj, -A+Aj, A+Aj, A- Aj, A+Aj, A-Aj, A-Aj, A+Aj, -A-Aj, A+Aj, A+Aj, A-Aj, -A+Aj, -A+Aj, A-Aj, A-Aj, A-Aj, -A-Aj, A- Aj, -A+Aj, A-Aj, A+Aj, A+Aj, A-Aj, A-Aj, A-Aj, A+Aj, -A+Aj, -A-Aj, -A+Aj, -A+Aj, A-Aj, - A+Aj, -A+Aj, -A+Aj, -A+Aj, A+Aj, A+Aj, -A-Aj, -A-Aj, -A+Aj, -A-Aj, -A-Aj, -A-Aj, -A-Aj, - A+Aj, A-Aj, -A-Aj, A+Aj, -A-Aj, -A-Aj, A+Aj, -A-Aj, A+Aj, -A-Aj, -A+Aj, -A-Aj, A-Aj, -A-Aj, A+Aj, -A+Aj, A+Aj, -A+Aj, A+Aj, -A-Aj, -A-Aj, A-Aj |
| 2 | Polarization 1 | -A-Aj, -A-Aj, -A-Aj, A+Aj, -A+Aj, A+Aj, A-Aj, A+Aj, -A+Aj, A-Aj, A-Aj, A-Aj, A+Aj, A-Aj, -A-Aj, -A-Aj, A+Aj, A-Aj, -A-Aj, A+Aj, -A-Aj, A+Aj, A+Aj, -A+Aj, -A+Aj, -A-Aj, -A-Aj, A-Aj, A+Aj, A- Aj, A+Aj, A+Aj, A-Aj, -A+Aj, A-Aj, A-Aj, A+Aj, -A-Aj, -A-Aj, A+Aj, A+Aj, A+Aj, - A+Aj, A+Aj, -A-Aj, A+Aj, A-Aj, A-Aj, A+Aj, A+Aj, A+Aj, A-Aj, -A-Aj, -A+Aj, -A-Aj, -A-Aj, A+Aj, -A-Aj, -A-Aj, -A-Aj, -A-Aj, A-Aj, A-Aj, -A+Aj, -A+Aj, -A-Aj, -A+Aj, -A+Aj, -A+Aj, - A+Aj, -A-Aj, A+Aj, -A+Aj, A-Aj, -A+Aj, -A+Aj, A-Aj, -A+Aj, A-Aj, -A+Aj, -A-Aj, -A+Aj, A+Aj, -A+Aj, A-Aj, -A-Aj, A-Aj, -A- Aj, A-Aj, -A+Aj, -A+Aj, A+Aj |
| 2 | Polarization 2 | A-Aj, A-Aj, A-Aj, -A+Aj, A+Aj, -A+Aj, -A-Aj, -A+Aj, A+Aj, -A-Aj, -A-Aj, -A-Aj, -A+Aj, -A-Aj, A- Aj, A-Aj, -A+Aj, -A-Aj, A-Aj, -A+Aj, A-Aj, -A+Aj, -A+Aj, A+Aj, A+Aj, A-Aj, A-Aj, -A-Aj, - A+Aj, -A-Aj, -A+Aj, -A+Aj, -A-Aj, A+Aj, -A-Aj, -A-Aj, -A+Aj, A-Aj, A-Aj, -A+Aj, -A+Aj, - A+Aj, A+Aj, -A+Aj, A-Aj, -A+Aj, -A-Aj, -A-Aj, -A+Aj, -A+Aj, -A+Aj, -A-Aj, A-Aj, A+Aj, A-Aj, A-Aj, -A+Aj, A- Aj, A-Aj, A-Aj, A-Aj, -A-Aj, -A-Aj, A+Aj, A+Aj, A-Aj, A+Aj, A+Aj, A+Aj, A+Aj, A-Aj, -A+Aj, A+Aj, -A-Aj, A+Aj, A+Aj, -A-Aj, A+Aj, -A-Aj, A+Aj, A-Aj, A+Aj, -A+Aj, A+Aj, - A-Aj, A-Aj, -A- Aj, A-Aj, -A-Aj, A+Aj, A+Aj, -A+Aj |
| 3 | Polarization 1 | A+Aj, A+Aj, A+Aj, -A-Aj, A-Aj, -A-Aj, -A+Aj, -A-Aj, A-Aj, -A+Aj, -A+Aj, -A+Aj, -A-Aj, -A+Aj, A+Aj, A+Aj, -A-Aj, -A+Aj, A+Aj, -A-Aj, A+Aj, -A-Aj, -A-Aj, A-Aj, A-Aj, A+Aj, A+Aj, -A+Aj, -A- Aj, -A+Aj, -A-Aj, -A-Aj, -A+Aj, A-Aj, -A+Aj, -A+Aj, -A-Aj, A+Aj, A+Aj, -A-Aj, -A-Aj, -A-Aj, A-Aj, -A-Aj, A+Aj, -A-Aj, -A+Aj, -A+Aj, -A-Aj, -A-Aj, -A-Aj, -A+Aj, A+Aj, A-Aj, A+Aj, A+Aj, - A-Aj, A+Aj, A+Aj, A+Aj, A+Aj, -A+Aj, -A+Aj, A-Aj, A-Aj, A+Aj, A-Aj, A-Aj, A-Aj, A-Aj, A+Aj, -A-Aj, A-Aj, -A+Aj, A-Aj, A-Aj, -A+Aj, A-Aj, -A+Aj, A-Aj, A+Aj, A-Aj, -A-Aj, A-Aj, -A+Aj, A+Aj, -A+Aj, A+Aj, -A+Aj, A-Aj, A-Aj, -A-Aj |
| 3 | Polarization 2 | -A+Aj, -A+Aj, -A+Aj, A-Aj, -A-Aj, A-Aj, A+Aj, A-Aj, -A-Aj, A+Aj, A+Aj, A+Aj, A-Aj, A+Aj, - A+Aj, -A+Aj, A-Aj, A+Aj, -A+Aj, A-Aj, -A+Aj, A-Aj, A-Aj, -A-Aj, -A-Aj, -A+Aj, -A+Aj, A+Aj, A- Aj, A+Aj, A-Aj, A-Aj, A+Aj, -A-Aj, A+Aj, A+Aj, A-Aj, -A+Aj, -A+Aj, A-Aj, A-Aj, A-Aj, -A-Aj, A- Aj, -A+Aj, A-Aj, A+Aj, A+Aj, A-Aj, A-Aj, A-Aj, A+Aj, -A+Aj, -A-Aj, -A+Aj, -A+Aj, A-Aj, - A+Aj, -A+Aj, -A+Aj, A+Aj, A+Aj, -A-Aj, -A-Aj, -A+Aj, -A-Aj, -A-Aj, -A-Aj, -A-Aj, - A+Aj, A-Aj, -A-Aj, A+Aj, -A-Aj, -A-Aj, A+Aj, -A-Aj, A+Aj, -A-Aj, -A+Aj, -A-Aj, A-Aj, -A-Aj, A+Aj, -A+Aj, A+Aj, -A+Aj, A+Aj, -A-Aj, -A-Aj, A-Aj |

(continued)

| Index | Polarization | Pilot sequence |
|---|---|---|
| 4 | Polarization 1 | A+Aj, A+Aj, A+Aj, -A-Aj, A-Aj, -A-Aj, -A+Aj, -A-Aj, A-Aj, -A+Aj, -A+Aj, -A+Aj, -A-Aj, -A+Aj, A+Aj, A+Aj, -A-Aj, -A+Aj, A+Aj, -A-Aj, A+Aj, -A-Aj, -A-Aj, A-Aj, A-Aj, A+Aj, A+Aj, -A+Aj, - A-Aj, -A+Aj, -A-Aj, -A-Aj, -A+Aj, A-Aj, -A+Aj, -A+Aj, -A-Aj, A+Aj, A+Aj, -A-Aj, -A-Aj, -A-Aj, A-Aj, -A-Aj, A+Aj, -A-Aj, -A+Aj, -A+Aj, -A-Aj, -A-Aj, -A-Aj, -A+Aj, A+Aj, A-Aj, A+Aj, A+Aj, - A-Aj, A+Aj, A+Aj, A+Aj, A+Aj, -A+Aj, -A+Aj, A-Aj, A-Aj, A+Aj, A-Aj, A-Aj, A-Aj, A-Aj, A+Aj, -A-Aj, A-Aj, -A+Aj, A-Aj, A-Aj, -A+Aj, A-Aj, -A+Aj, A-Aj, A+Aj, A-Aj, -A-Aj, A-Aj, -A+Aj, A+Aj, -A+Aj, A+Aj, -A+Aj, A-Aj, A-Aj, -A-Aj |
| | Polarization 2 | A-Aj, A-Aj, A-Aj, -A+Aj, A+Aj, -A+Aj, -A-Aj, -A+Aj, A+Aj, -A-Aj, -A-Aj, -A-Aj, -A+Aj, -A-Aj, A-Aj, A-Aj, -A+Aj, -A-Aj, A-Aj, -A+Aj, A-Aj, -A+Aj, -A+Aj, A+Aj, A+Aj, A-Aj, A-Aj, -A-Aj, - A+Aj, -A-Aj, -A+Aj, -A+Aj, -A-Aj, A+Aj, -A-Aj, -A-Aj, -A+Aj, A-Aj, A-Aj, -A+Aj, -A+Aj, - A+Aj, A+Aj, -A+Aj, A-Aj, -A+Aj, -A-Aj, -A-Aj, -A+Aj, -A+Aj, -A+Aj, -A-Aj, A-Aj, A+Aj, A-Aj, A-Aj, -A+Aj, A-Aj, A-Aj, A-Aj, A-Aj, -A-Aj, -A-Aj, A+Aj, A+Aj, A-Aj, A+Aj, A+Aj, A+Aj, A+Aj, A-Aj, -A+Aj, A+Aj, -A-Aj, A+Aj, A+Aj, -A-Aj, A+Aj, -A-Aj, A+Aj, A-Aj, A+Aj, -A+Aj, A+Aj, - A-Aj, A-Aj, -A-Aj, A-Aj, -A-Aj, A+Aj, A+Aj, -A+Aj |
| 5 | Polarization 1 | -A-Aj, -A+Aj, -A+Aj, A-Aj, A+Aj, A-Aj, A+Aj, A-Aj, -A+Aj, -A-Aj, -A+Aj, A+Aj, -A+Aj, A-Aj, - A+Aj, A-Aj, -A+Aj, -A+Aj, A-Aj, -A+Aj, -A-Aj, A+Aj, -A+Aj, -A+Aj, -A+Aj, -A+Aj, A+Aj, - A+Aj, -A+Aj, A-Aj, A-Aj, A+Aj, A+Aj, A+Aj, A+Aj, -A-Aj, A+Aj, A+Aj, -A+Aj, A+Aj, A-Aj, -A-Aj, -A-Aj, -A-Aj, A-Aj, A-Aj, -A-Aj, A+Aj, -A-Aj, -A+Aj, -A-Aj, -A-Aj, -A-Aj, A+Aj, A+Aj, -A-Aj, A-Aj, A-Aj, -A+Aj, A-Aj, -A-Aj, -A-Aj, A-Aj, -A-Aj, A-Aj, A+Aj, A+Aj, -A+Aj, -A+Aj, -A-Aj, -A-Aj, A+Aj, -A-Aj, A+Aj, A-Aj, -A-Aj, A+Aj, A+Aj, A-Aj, -A-Aj, A-Aj, A-Aj, A-Aj, -A+Aj, -A-Aj, A-Aj, -A-Aj, -A+Aj, -A-Aj, A+Aj, A+Aj, A+Aj |
| | Polarization 2 | -A+Aj, -A-Aj, -A-Aj, A+Aj, A-Aj, A+Aj, A-Aj, A+Aj, -A-Aj, -A+Aj, -A-Aj, A-Aj, -A-Aj, A+Aj, - A-Aj, A+Aj, -A-Aj, -A-Aj, A+Aj, -A-Aj, -A+Aj, A-Aj, -A-Aj, -A-Aj, -A-Aj, -A-Aj, A-Aj, -A-Aj, - A-Aj, A+Aj, A+Aj, A-Aj, A-Aj, A-Aj, A-Aj, -A+Aj, A-Aj, A-Aj, -A-Aj, A-Aj, A+Aj, -A+Aj, -A+Aj, -A+Aj, A+Aj, A+Aj, -A+Aj, A-Aj, -A+Aj, -A-Aj, -A+Aj, -A+Aj, -A+Aj, A-Aj, A-Aj, -A+Aj, A+Aj, A+Aj, -A-Aj, A+Aj, -A+Aj, -A+Aj, A+Aj, -A+Aj, A+Aj, A-Aj, A-Aj, -A-Aj, -A-Aj, -A+Aj, -A+Aj, A-Aj, -A+Aj, A-Aj, A+Aj, -A+Aj, A-Aj, A-Aj, A+Aj, -A+Aj, A+Aj, A+Aj, A+Aj, -A-Aj, -A+Aj, A+Aj, -A+Aj, -A-Aj, -A+Aj, A-Aj, A-Aj, A-Aj |
| 6 | Polarization 1 | -A-Aj, -A+Aj, -A+Aj, A-Aj, A+Aj, A-Aj, A+Aj, A-Aj, -A+Aj, -A-Aj, -A+Aj, A+Aj, -A+Aj, A-Aj, - A+Aj, A-Aj, -A+Aj, -A+Aj, A-Aj, -A+Aj, -A-Aj, A+Aj, -A+Aj, -A+Aj, -A+Aj, -A+Aj, A+Aj, - A+Aj, -A+Aj, A-Aj, A-Aj, A+Aj, A+Aj, A+Aj, A+Aj, -A-Aj, A+Aj, A+Aj, -A+Aj, A+Aj, A-Aj, -A-Aj, -A-Aj, A-Aj, A-Aj, -A-Aj, A+Aj, -A-Aj, -A+Aj, -A-Aj, -A-Aj, -A-Aj, A+Aj, A+Aj, -A-Aj, A-Aj, A-Aj, -A+Aj, A-Aj, -A-Aj, -A-Aj, A-Aj, -A-Aj, A-Aj, A+Aj, A+Aj, -A+Aj, -A+Aj, -A-Aj, -A-Aj, A+Aj, -A-Aj, A+Aj, A-Aj, -A-Aj, A+Aj, A+Aj, A-Aj, -A-Aj, A-Aj, A-Aj, A-Aj, -A+Aj, -A-Aj, A-Aj, -A-Aj, -A+Aj, -A-Aj, A+Aj, A+Aj, A+Aj |
| | Polarization 2 | A-Aj, A+Aj, A+Aj, -A-Aj, -A+Aj, -A-Aj, -A+Aj, -A-Aj, A+Aj, A-Aj, A+Aj, -A+Aj, A+Aj, -A-Aj, A+Aj, -A-Aj, A+Aj, A+Aj, -A-Aj, A+Aj, A-Aj, -A+Aj, A+Aj, A+Aj, A+Aj, A+Aj, -A+Aj, A+Aj, A+Aj, -A-Aj, -A-Aj, -A+Aj, -A+Aj, -A+Aj, -A+Aj, A-Aj, -A+Aj, -A+Aj, A+Aj, -A+Aj, -A-Aj, A-Aj, A-Aj, A-Aj, -A-Aj, -A-Aj, A-Aj, -A+Aj, A-Aj, A+Aj, A-Aj, A-Aj, A-Aj, -A+Aj, -A+Aj, A-Aj, - A-Aj, -A-Aj, A+Aj, -A-Aj, A-Aj, A-Aj, -A-Aj, A-Aj, -A-Aj, -A+Aj, -A+Aj, A+Aj, A+Aj, A-Aj, A-Aj, -A+Aj, A-Aj, -A+Aj, -A-Aj, A-Aj, -A+Aj, -A+Aj, -A-Aj, A-Aj, -A-Aj, -A-Aj, -A-Aj, A+Aj, A-Aj, -A-Aj, A-Aj, A+Aj, A-Aj, -A+Aj, -A+Aj, -A+Aj |

(continued)

| Index | Polarization | Pilot sequence |
|---|---|---|
| 7 | Polarization 1 | A+Aj, A-Aj, A-Aj, -A+Aj, -A-Aj, -A+Aj, -A-Aj, -A+Aj, A-Aj, A+Aj, A-Aj, -A-Aj, A-Aj, -A+Aj, A-Aj, -A+Aj, A-Aj, A-Aj, -A+Aj, A-Aj, A+Aj, -A-Aj, A-Aj, A-Aj, A-Aj, A-Aj, -A-Aj, A-Aj, A-Aj, - A+Aj, -A+Aj, -A-Aj, -A-Aj, -A-Aj, -A-Aj, A+Aj, -A-Aj, -A-Aj, A-Aj, -A-Aj, -A+Aj, A+Aj, A+Aj, A+Aj, -A+Aj, -A+Aj, A+Aj, -A-Aj, A+Aj, A-Aj, A+Aj, A+Aj, A+Aj, -A-Aj, -A-Aj, A+Aj, -A+Aj, - A+Aj, A-Aj, -A+Aj, A+Aj, A+Aj, -A+Aj, A+Aj, -A+Aj, -A-Aj, -A-Aj, A-Aj, A-Aj, A+Aj, A+Aj, - A-Aj, A+Aj, -A-Aj, -A+Aj, A+Aj, -A-Aj, -A-Aj, -A+Aj, A+Aj, -A+Aj, -A+Aj, -A+Aj, A-Aj, A+Aj, -A+Aj, A+Aj, A-Aj, A+Aj, -A-Aj, -A-Aj, -A-Aj |
| | Polarization 2 | -A+Aj, -A-Aj, -A-Aj, A+Aj, A-Aj, A+Aj, A-Aj, A+Aj, -A-Aj, -A+Aj, -A-Aj, A-Aj, -A-Aj, A+Aj, - A-Aj, A+Aj, -A-Aj, -A-Aj, A+Aj, -A-Aj, -A+Aj, A-Aj, -A-Aj, -A-Aj, -A-Aj, -A-Aj, A-Aj, -A-Aj, - A-Aj, A+Aj, A+Aj, A-Aj, A-Aj, A-Aj, A-Aj, -A+Aj, A-Aj, A-Aj, -A-Aj, A-Aj, A+Aj, -A+Aj, -A+Aj, -A+Aj, A+Aj, A+Aj, -A+Aj, A-Aj, -A+Aj, -A-Aj, -A+Aj, -A+Aj, -A+Aj, A-Aj, A-Aj, -A+Aj, A+Aj, A+Aj, -A-Aj, A+Aj, -A+Aj, -A+Aj, A+Aj, -A+Aj, A+Aj, A-Aj, A-Aj, -A-Aj, -A-Aj, -A+Aj, -A+Aj, A-Aj, -A+Aj, A-Aj, A+Aj, -A+Aj, A-Aj, A-Aj, A+Aj, -A+Aj, A+Aj, A+Aj, A+Aj, -A-Aj, -A+Aj, A+Aj, -A+Aj, -A-Aj, -A+Aj, A-Aj, A-Aj, A-Aj |
| 8 | Polarization 1 | A+Aj, A-Aj, A-Aj, -A+Aj, -A-Aj, -A+Aj, -A-Aj, -A+Aj, A-Aj, A+Aj, A-Aj, -A-Aj, A-Aj, -A+Aj, A-Aj, -A+Aj, A-Aj, A-Aj, -A+Aj, A-Aj, A+Aj, -A-Aj, A-Aj, A-Aj, A-Aj, A-Aj, A-Aj, -A-Aj, A-Aj, A-Aj, - A+Aj, -A+Aj, -A-Aj, -A-Aj, -A-Aj, -A-Aj, A+Aj, -A-Aj, -A-Aj, A-Aj, -A-Aj, -A+Aj, A+Aj, A+Aj, A+Aj, -A+Aj, -A+Aj, A+Aj, -A-Aj, A+Aj, A-Aj, A+Aj, A+Aj, A+Aj, -A-Aj, -A-Aj, A+Aj, -A+Aj, - A+Aj, A-Aj, -A+Aj, A+Aj, A+Aj, -A+Aj, A+Aj, -A+Aj, -A-Aj, -A-Aj, A-Aj, A-Aj, A+Aj, A+Aj, - A-Aj, A+Aj, -A-Aj, -A+Aj, A+Aj, -A-Aj, -A-Aj, -A+Aj, A+Aj, -A+Aj, -A+Aj, -A+Aj, A-Aj, A+Aj, -A+Aj, A+Aj, A-Aj, A+Aj, -A-Aj, -A-Aj, -A-Aj |
| | Polarization 2 | A-Aj, A+Aj, A+Aj, -A-Aj, -A+Aj, -A-Aj, -A+Aj, -A-Aj, A+Aj, A-Aj, A+Aj, -A+Aj, A+Aj, -A-Aj, A+Aj, -A-Aj, A+Aj, A+Aj, -A-Aj, A+Aj, A-Aj, -A+Aj, A+Aj, A+Aj, A+Aj, A+Aj, -A+Aj, A+Aj, A+Aj, -A-Aj, -A-Aj, -A+Aj, -A+Aj, -A+Aj, -A+Aj, A-Aj, -A+Aj, -A+Aj, A+Aj, -A+Aj, -A-Aj, A-Aj, A-Aj, A-Aj, -A-Aj, -A-Aj, A-Aj, -A+Aj, A-Aj, A+Aj, A-Aj, A-Aj, A-Aj, -A+Aj, -A+Aj, A-Aj, - A-Aj, -A-Aj, A+Aj, -A-Aj, A-Aj, A-Aj, -A-Aj, A-Aj, -A-Aj, -A+Aj, -A+Aj, A+Aj, A+Aj, A-Aj, A-Aj, -A+Aj, A-Aj, -A+Aj, -A-Aj, A-Aj, -A+Aj, -A+Aj, -A-Aj, A-Aj, -A-Aj, -A-Aj, -A-Aj, A+Aj, A-Aj, -A-Aj, A-Aj, A+Aj, A-Aj, -A+Aj, -A+Aj, -A+Aj |
| 9 | Polarization 1 | -A-Aj, -A-Aj, A+Aj, A+Aj, A+Aj, A+Aj, A+Aj, -A+Aj, A-Aj, A-Aj, A+Aj, A-Aj, A+Aj, -A-Aj, A-Aj, A-Aj, -A+Aj, -A+Aj, A-Aj, A+Aj, -A-Aj, -A-Aj, A-Aj, -A-Aj, A+Aj, -A+Aj, A+Aj, -A+Aj, -A-Aj, -A+Aj, -A-Aj, A-Aj, -A+Aj, A+Aj, -A-Aj, A-Aj, A+Aj, -A+Aj, -A+Aj, -A+Aj, A-Aj, A-Aj, -A-Aj, -A-Aj, -A+Aj, -A+Aj, -A+Aj, -A+Aj, -A+Aj, -A-Aj, A-Aj, -A+Aj, A-Aj, A-Aj, -A+Aj, -A-Aj, - A+Aj, A-Aj, -A-Aj, A+Aj, -A+Aj, A-Aj, A+Aj, A+Aj, A-Aj, -A-Aj, -A+Aj, -A-Aj, A-Aj, A+Aj, -A-Aj, -A-Aj, A+Aj, A-Aj, -A-Aj, A-Aj, A+Aj, A-Aj, -A+Aj, -A-Aj, A+Aj, -A-Aj, A-Aj, -A+Aj, A+Aj, A+Aj, A+Aj, -A-Aj, A+Aj, -A-Aj, A+Aj, -A-Aj |
| | Polarization 2 | -A+Aj, A-Aj, -A+Aj, -A+Aj, -A+Aj, -A-Aj, -A-Aj, A-Aj, A-Aj, A+Aj, -A-Aj, -A+Aj, A-Aj, -A-Aj, - A-Aj, -A-Aj, -A+Aj, -A+Aj, A-Aj, -A-Aj, A-Aj, A-Aj, A+Aj, A+Aj, -A-Aj, -A+Aj, A-Aj, -A+Aj, A-Aj, A+Aj, A-Aj, -A+Aj, -A+Aj, -A+Aj, A+Aj, -A+Aj, -A+Aj, -A-Aj, A-Aj, A-Aj, A+Aj, -A+Aj, A+Aj, -A+Aj, A+Aj, -A-Aj, A+Aj, -A-Aj, -A-Aj, -A+Aj, A-Aj, -A+Aj, -A-Aj, -A-Aj, A-Aj, -A-Aj, - A-Aj, -A-Aj, A+Aj, -A+Aj, A+Aj, A-Aj, -A+Aj, A-Aj, A-Aj, A+Aj, A+Aj, -A+Aj, A+Aj, - A+Aj, A-Aj, A-Aj, -A-Aj, A+Aj, -A-Aj, A-Aj, A+Aj, -A-Aj, A+Aj, A-Aj, -A+Aj, A-Aj, A+Aj, - A+Aj, -A-Aj, A-Aj, A+Aj, A-Aj, A+Aj, A+Aj, A+Aj |

(continued)

| Index | Polarization | Pilot sequence |
|---|---|---|
| 10 | Polarization 1 | -A-Aj, -A-Aj, A+Aj, A+Aj, A+Aj, A+Aj, A+Aj, -A+Aj, A-Aj, A-Aj, A+Aj, A-Aj, A+Aj, -A-Aj, A-Aj, A-Aj, -A+Aj, -A+Aj, A-Aj, A+Aj, -A-Aj, -A-Aj, A-Aj, -A-Aj, A+Aj, -A+Aj, A+Aj, -A+Aj, -A-Aj, -A+Aj, -A-Aj, A-Aj, -A+Aj, A+Aj, -A-Aj, A-Aj, A+Aj, -A+Aj, -A+Aj, -A+Aj, A-Aj, A-Aj, -A-Aj, -A-Aj, -A+Aj, -A+Aj, -A+Aj, A+Aj, -A+Aj, -A-Aj, A-Aj, -A+Aj, A-Aj, A-Aj, -A+Aj, -A-Aj, - A+Aj, A-Aj, -A-Aj, A+Aj, -A+Aj, A-Aj, A+Aj, A+Aj, A-Aj, -A-Aj, -A+Aj, -A-Aj, A-Aj, A+Aj, -A-Aj, -A-Aj, A+Aj, A-Aj, -A-Aj, A-Aj, A+Aj, A-Aj, -A+Aj, -A-Aj, A+Aj, -A-Aj, A-Aj, -A+Aj, A+Aj, A+Aj, A+Aj, -A-Aj, A+Aj, -A-Aj, A+Aj, -A-Aj |
| | Polarization 2 | A-Aj, -A+Aj, -A+Aj, -A+Aj, -A-Aj, -A-Aj, A-Aj, A-Aj, A+Aj, -A-Aj, -A+Aj, A-Aj, -A-Aj, -A-Aj, - A-Aj, -A+Aj, -A+Aj, A-Aj, -A-Aj, A-Aj, A-Aj, A+Aj, A+Aj, -A-Aj, -A+Aj, A-Aj, -A+Aj, A-Aj, A+Aj, A-Aj, -A+Aj, -A+Aj, -A+Aj, A+Aj, -A+Aj, -A+Aj, -A-Aj, A-Aj, A-Aj, A+Aj, -A+Aj, A+Aj, -A+Aj, A+Aj, -A-Aj, A+Aj, -A-Aj, -A-Aj, -A+Aj, A-Aj, -A+Aj, -A-Aj, -A-Aj, A-Aj, -A-Aj, -A-Aj, -A-Aj, -A-Aj, -A-Aj, -A-Aj, -A-Aj, A+Aj, -A+Aj, A+Aj, A-Aj, -A+Aj, A-Aj, A-Aj, A+Aj, A+Aj, -A+Aj, A+Aj, -A+Aj, A-Aj, A-Aj, -A-Aj, A+Aj, -A-Aj, A-Aj, A+Aj, -A-Aj, A+Aj, A-Aj, -A+Aj, A-Aj, A+Aj, -A+Aj, -A-Aj, A-Aj, A+Aj, A-Aj, A+Aj, A+Aj, A+Aj, -A+Aj |
| 11 | Polarization 1 | -A-Aj, A+Aj, -A-Aj, A+Aj, -A-Aj, A+Aj, A+Aj, A+Aj, A-Aj, -A+Aj, -A-Aj, A+Aj, -A-Aj, A-Aj, - A+Aj, A+Aj, -A+Aj, -A-Aj, -A+Aj, A+Aj, -A-Aj, -A-Aj, A+Aj, -A+Aj, -A-Aj, A-Aj, -A-Aj, -A+Aj, A+Aj, A+Aj, -A+Aj, A-Aj, A+Aj, -A-Aj, -A+Aj, A-Aj, -A-Aj, A-Aj, -A+Aj, -A+Aj, A-Aj, -A+Aj, - A-Aj, A-Aj, A-Aj, A-Aj, A-Aj, A-Aj, -A-Aj, -A-Aj, -A+Aj, -A+Aj, A-Aj, A-Aj, A-Aj, A+Aj, -A+Aj, -A-Aj, A+Aj, A-Aj, -A+Aj, -A-Aj, A-Aj, -A-Aj, A-Aj, A+Aj, A-Aj, A+Aj, -A-Aj, -A+Aj, -A-Aj, -A-Aj, A+Aj, -A+Aj, A-Aj, A-Aj, -A+Aj, -A+Aj, -A-Aj, A+Aj, -A+Aj, A+Aj, -A+Aj, -A+Aj, A-Aj, A+Aj, A+Aj, A+Aj, A+Aj, A+Aj, -A-Aj, -A-Aj |
| | Polarization 2 | A-Aj, A+Aj, A+Aj, A+Aj, -A+Aj, A+Aj, -A+Aj, -A-Aj, A-Aj, A+Aj, -A+Aj, A-Aj, -A+Aj, A+Aj, - A-Aj, A+Aj, -A+Aj, -A-Aj, A+Aj, -A-Aj, -A+Aj, -A+Aj, A-Aj, A+Aj, A-Aj, A+Aj, A+Aj, -A+Aj, - A+Aj, A-Aj, -A+Aj, A+Aj, A-Aj, A+Aj, -A-Aj, -A-Aj, -A-Aj, -A-Aj, -A+Aj, -A-Aj, -A-Aj, A-Aj, -A+Aj, A-Aj, -A-Aj, -A-Aj, A+Aj, -A-Aj, A+Aj, A-Aj, A+Aj, A-Aj, A+Aj, -A+Aj, -A+Aj, -A-Aj, A-Aj, A-Aj, A+Aj, A-Aj, A-Aj, A-Aj, -A+Aj, A+Aj, -A+Aj, A-Aj, -A+Aj, A-Aj, -A-Aj, A+Aj, A+Aj, - A+Aj, -A+Aj, -A-Aj, -A+Aj, A-Aj, A-Aj, -A-Aj, -A-Aj, -A-Aj, -A+Aj, A-Aj, -A-Aj, A+Aj, -A+Aj, - A+Aj, -A-Aj, -A-Aj, A-Aj, A-Aj, A-Aj, -A+Aj |
| 12 | Polarization 1 | -A-Aj, A+Aj, -A-Aj, A+Aj, -A-Aj, A+Aj, A+Aj, A+Aj, A-Aj, -A+Aj, -A-Aj, A+Aj, -A-Aj, A-Aj, - A+Aj, A+Aj, -A+Aj, -A-Aj, -A+Aj, A+Aj, -A-Aj, -A-Aj, A+Aj, -A+Aj, -A-Aj, A-Aj, -A-Aj, -A+Aj, A+Aj, A+Aj, -A+Aj, A-Aj, A+Aj, -A-Aj, -A+Aj, A-Aj, -A-Aj, A-Aj, -A+Aj, -A+Aj, A-Aj, -A+Aj, - A-Aj, A-Aj, A-Aj, A-Aj, A-Aj, A-Aj, -A-Aj, -A-Aj, -A+Aj, -A+Aj, A-Aj, A-Aj, A-Aj, A+Aj, -A+Aj, -A-Aj, A+Aj, A-Aj, -A+Aj, -A-Aj, A-Aj, -A-Aj, A-Aj, A+Aj, A-Aj, A+Aj, -A-Aj, -A+Aj, -A-Aj, -A-Aj, A+Aj, -A+Aj, A-Aj, A-Aj, -A+Aj, -A+Aj, -A-Aj, A+Aj, -A+Aj, A+Aj, -A+Aj, -A+Aj, A-Aj, A+Aj, A+Aj, A+Aj, A+Aj, A+Aj, -A-Aj, -A-Aj |
| | Polarization 2 | A+Aj, A+Aj, A+Aj, -A+Aj, A+Aj, -A+Aj, -A-Aj, A-Aj, A+Aj, -A+Aj, A-Aj, -A+Aj, A+Aj, -A-Aj, A+Aj, -A+Aj, -A-Aj, A+Aj, -A-Aj, -A+Aj, -A+Aj, A-Aj, A+Aj, A-Aj, A+Aj, A+Aj, -A+Aj, -A+Aj, A-Aj, -A+Aj, A+Aj, A-Aj, A+Aj, -A-Aj, -A-Aj, -A-Aj, -A-Aj, -A+Aj, -A-Aj, -A-Aj, A-Aj, -A+Aj, A-Aj, -A-Aj, -A-Aj, A+Aj, -A-Aj, A+Aj, A-Aj, A+Aj, A-Aj, A+Aj, -A+Aj, -A+Aj, -A-Aj, A-Aj, A-Aj, A+Aj, A-Aj, A-Aj, A-Aj, -A+Aj, A+Aj, -A+Aj, A-Aj, -A+Aj, A-Aj, -A-Aj, A+Aj, A+Aj, -A+Aj, -A+Aj, -A-Aj, -A+Aj, A-Aj, A-Aj, -A-Aj, -A-Aj, -A-Aj, -A+Aj, A-Aj, -A-Aj, A+Aj, -A+Aj, -A+Aj, -A-Aj, -A-Aj, A-Aj, A-Aj, A-Aj, -A+Aj, A-Aj |

(22) Particularly, when $N_{PS}$ = 96, if a remainder of $N_{TS}$ divided by 4 is 1, the pilot sequence is one item in Table 29-1. If a remainder of $N_{TS}$ divided by 4 is 3, the pilot sequence is one item in Table 29-1 or Table 29-2. Alternatively, any item is selected from Table 29-3 as a pilot sequence in one polarization direction, and any item is selected from Table 29-4 as a pilot sequence in the other polarization direction. Alternatively, any item is selected from Table 29-5 as a pilot sequence in one polarization direction, and any item is selected from Table 29-6 as a pilot sequence in the other polarization direction.

**Table 29-1**

| Index | Polarization | Pilot sequence |
|---|---|---|
| 1 | Polarization 1 | -A-Aj, -A-Aj, A-Aj, -A+Aj, -A+Aj, -A-Aj, A-Aj, -A+Aj, -A-Aj, A+Aj, -A-Aj, A-Aj, A+Aj, A+Aj, A+Aj, -A+Aj, -A-Aj, -A-Aj, A-Aj, -A-Aj, A-Aj, A-Aj, -A+Aj, A-Aj, -A-Aj, -A-Aj, A+Aj, -A+Aj, -A-Aj, A-Aj, A-Aj, A+Aj, A-Aj, A+Aj, -A-Aj, A-Aj, -A-Aj, -A-Aj, A-Aj, A-Aj, A-Aj, -A+Aj, - A+Aj, A+Aj, -A+Aj, -A-Aj, A+Aj, -A+Aj, -A+Aj, -A+Aj, -A-Aj, -A-Aj, -A+Aj, A+Aj, A+Aj, - A+Aj, A+Aj, A+Aj, A+Aj, A+Aj, -A-Aj, A+Aj, A-Aj, -A+Aj, A+Aj, A-Aj, -A+Aj, A-Aj, -A+Aj, A+Aj, -A+Aj, A-Aj, A+Aj, A-Aj, -A+Aj, -A-Aj, -A+Aj, -A-Aj, -A+Aj, A+Aj, A-Aj, A-Aj, -A+Aj, -A-Aj, -A-Aj, A+Aj, A+Aj, -A-Aj, -A+Aj, A-Aj, A-Aj, A+Aj, A+Aj, -A-Aj, A-Aj, -A+Aj |
| | Polarization 2 | -A+Aj, -A+Aj, A+Aj, -A-Aj, -A-Aj, -A+Aj, A+Aj, -A-Aj, -A+Aj, A-Aj, -A+Aj, A+Aj, A-Aj, A-Aj, A-Aj, -A-Aj, -A+Aj, -A+Aj, A+Aj, -A+Aj, A+Aj, A+Aj, -A-Aj, A+Aj, -A+Aj, -A+Aj, A-Aj, - A-Aj, -A+Aj, A+Aj, A+Aj, A-Aj, A+Aj, A-Aj, -A+Aj, A+Aj, -A+Aj, -A+Aj, A+Aj, A+Aj, A+Aj, - A-Aj, -A-Aj, A-Aj, -A-Aj, -A+Aj, A-Aj, -A-Aj, -A-Aj, -A-Aj, -A+Aj, -A+Aj, -A-Aj, A-Aj, A-Aj, - A-Aj, A-Aj, A-Aj, A-Aj, A-Aj, -A+Aj, A-Aj, A+Aj, -A-Aj, A-Aj, A+Aj, -A-Aj, A+Aj, -A-Aj, A-Aj, -A-Aj, A+Aj, A-Aj, A+Aj, -A-Aj, -A+Aj, -A-Aj, -A+Aj, -A-Aj, A-Aj, A+Aj, A+Aj, -A-Aj, - A+Aj, -A+Aj, A-Aj, A-Aj, -A+Aj, -A-Aj, A+Aj, A+Aj, A-Aj, A-Aj, -A+Aj, A+Aj, -A-Aj |
| 2 | Polarization 1 | -A-Aj, -A-Aj, A-Aj, -A+Aj, -A+Aj, -A-Aj, A-Aj, -A+Aj, -A-Aj, A+Aj, -A-Aj, A-Aj, A+Aj, A+Aj, A+Aj, -A+Aj, -A-Aj, -A-Aj, A-Aj, -A-Aj, A-Aj, A-Aj, -A+Aj, A-Aj, -A-Aj, -A-Aj, A+Aj, -A+Aj, -A-Aj, A-Aj, A-Aj, A+Aj, A-Aj, A+Aj, -A-Aj, A-Aj, -A-Aj, -A-Aj, A-Aj, A-Aj, A-Aj, -A+Aj, - A+Aj, A+Aj, -A+Aj, -A-Aj, A+Aj, -A+Aj, -A+Aj, -A+Aj, -A-Aj, -A-Aj, -A+Aj, A+Aj, A+Aj, - A+Aj, A+Aj, A+Aj, A+Aj, A+Aj, -A-Aj, A+Aj, A-Aj, -A+Aj, A+Aj, A-Aj, -A+Aj, A-Aj, -A+Aj, A+Aj, -A+Aj, A-Aj, A+Aj, A-Aj, -A+Aj, -A-Aj, -A+Aj, -A-Aj, -A+Aj, A+Aj, A-Aj, A-Aj, -A+Aj, -A-Aj, -A-Aj, A+Aj, A+Aj, -A-Aj, A-Aj, -A+Aj |
| | Polarization 2 | A-Aj, A-Aj, -A-Aj, A+Aj, A+Aj, A-Aj, -A-Aj, A+Aj, A-Aj, -A+Aj, A-Aj, -A-Aj, -A+Aj, -A+Aj, - A+Aj, A+Aj, A-Aj, A-Aj, -A-Aj, A-Aj, -A-Aj, -A-Aj, A+Aj, -A-Aj, A-Aj, A-Aj, -A+Aj, A+Aj, A-Aj, -A-Aj, -A-Aj, -A+Aj, -A-Aj, -A+Aj, A-Aj, -A-Aj, A-Aj, A-Aj, -A-Aj, -A-Aj, -A-Aj, A+Aj, A+Aj, -A+Aj, A+Aj, A-Aj, -A+Aj, A+Aj, A+Aj, A+Aj, A-Aj, A-Aj, A+Aj, -A+Aj, -A+Aj, A+Aj, - A+Aj, -A+Aj, -A+Aj, -A+Aj, A-Aj, -A+Aj, -A-Aj, A+Aj, -A+Aj, -A-Aj, A+Aj, -A-Aj, A+Aj, - A+Aj, A+Aj, -A-Aj, -A+Aj, -A-Aj, A+Aj, A-Aj, A+Aj, A-Aj, A+Aj, -A+Aj, -A-Aj, -A-Aj, A+Aj, A-Aj, A-Aj, -A+Aj, -A+Aj, A-Aj. A+Aj, -A-Aj, -A-Aj, -A+Aj, -A+Aj, A-Aj, -A-Aj, A+Aj |
| 3 | Polarization 1 | -A+Aj, -A+Aj, A+Aj, -A-Aj, -A-Aj, -A+Aj, A+Aj, -A-Aj, -A+Aj, A-Aj, -A+Aj, A+Aj, A-Aj, A-Aj, A-Aj, -A-Aj, -A+Aj, -A+Aj, A+Aj, -A+Aj, A+Aj, A+Aj, -A-Aj, A+Aj, -A+Aj, -A+Aj, A-Aj, - A-Aj, -A+Aj, A+Aj, A+Aj, A-Aj, A+Aj, A-Aj, -A+Aj, A+Aj, -A+Aj, -A+Aj, A+Aj, A+Aj, A+Aj, - A-Aj, -A-Aj, A-Aj, -A-Aj, -A+Aj, A-Aj, -A-Aj, -A-Aj, -A-Aj, -A+Aj, -A+Aj, -A-Aj, A-Aj, A-Aj, - A-Aj, A-Aj, A-Aj, A-Aj, A-Aj, -A+Aj, A-Aj, A+Aj, -A-Aj, A-Aj, A+Aj, -A-Aj, A+Aj, -A-Aj, A-Aj, -A-Aj, A+Aj, A-Aj, A+Aj, -A-Aj, -A+Aj, -A-Aj, -A+Aj, -A-Aj, A-Aj, A+Aj, A+Aj, -A-Aj, - A+Aj, -A+Aj, A-Aj, A-Aj, -A+Aj, -A-Aj, A+Aj, A+Aj, A-Aj, A-Aj, -A+Aj, A+Aj, -A-Aj |
| | Polarization 2 | A+Aj, A+Aj, -A+Aj, A-Aj, A-Aj, A+Aj, -A+Aj, A-Aj, A+Aj, -A-Aj, A+Aj, -A+Aj, -A-Aj, -A-Aj, - A-Aj, A-Aj, A+Aj, A+Aj, -A+Aj, A+Aj, -A+Aj, -A+Aj, A-Aj, -A+Aj, A+Aj, A+Aj, -A-Aj, A-Aj, A+Aj, -A+Aj, -A+Aj, -A-Aj, -A+Aj, -A-Aj, A+Aj, -A+Aj, A+Aj, A+Aj, -A+Aj, -A+Aj, -A+Aj, A-Aj, A-Aj, -A-Aj, A-Aj, A+Aj, -A-Aj, A-Aj, A-Aj, A-Aj, A+Aj, A+Aj, A-Aj, -A-Aj, -A-Aj, A-Aj, - A-Aj, -A-Aj, -A-Aj, -A-Aj, A+Aj, -A-Aj, -A+Aj, A-Aj, -A-Aj, -A+Aj, A-Aj, -A+Aj, A-Aj, -A-Aj, A-Aj, -A+Aj, -A-Aj, A-Aj, A+Aj, A-Aj, A+Aj, A-Aj, -A-Aj, -A+Aj, -A+Aj, A-Aj, A+Aj, A+Aj, -A-Aj, -A-Aj, A+Aj, A-Aj. -A+Aj, -A+Aj, -A-Aj, -A-Aj, A+Aj, -A+Aj, A-Aj |

(continued)

| Index | Polarization | Pilot sequence |
|---|---|---|
| 4 | Polarization 1 | A-Aj, A-Aj, -A-Aj, A+Aj, A+Aj, A-Aj, -A-Aj, A+Aj, A-Aj, -A+Aj, A-Aj, -A-Aj, -A+Aj, -A+Aj, -A+Aj, A+Aj, A-Aj, A-Aj, -A-Aj, A-Aj, -A-Aj, -A-Aj, A+Aj, -A-Aj, A-Aj, A-Aj, -A+Aj, A+Aj, A-Aj, -A-Aj, -A-Aj, -A+Aj, -A-Aj, -A+Aj, A-Aj, -A-Aj, A-Aj, A-Aj, -A-Aj, -A-Aj, -A-Aj, A+Aj, A+Aj, -A+Aj, A+Aj, A-Aj, -A+Aj, A+Aj, A+Aj, A+Aj, A-Aj, A-Aj, A+Aj, -A+Aj, -A+Aj, A+Aj, - A+Aj, -A+Aj, -A+Aj, -A+Aj, A-Aj, -A+Aj, -A-Aj, A+Aj, -A+Aj, -A-Aj, A+Aj, -A-Aj, A+Aj, - A+Aj, A+Aj, -A-Aj, -A+Aj, -A-Aj, A+Aj, A-Aj, A+Aj, A-Aj, A+Aj, -A+Aj, -A-Aj, -A-Aj, A+Aj, A-Aj, A-Aj, -A+Aj, -A+Aj, A-Aj. A+Aj, -A-Aj, -A-Aj, -A+Aj, -A+Aj, A-Aj, -A-Aj, A+Aj |
| | Polarization 2 | A+Aj, A+Aj, -A+Aj, A-Aj, A-Aj, A+Aj, -A+Aj, A-Aj, A+Aj, -A-Aj, A+Aj, -A+Aj, -A-Aj, -A-Aj, - A-Aj, A-Aj, A+Aj, A+Aj, -A+Aj, A+Aj, -A+Aj, -A+Aj, A-Aj, -A+Aj, A+Aj, A+Aj, -A-Aj, A-Aj, A+Aj, -A+Aj, -A+Aj, -A-Aj, -A+Aj, -A-Aj, A+Aj, -A+Aj, A+Aj, A+Aj, -A+Aj, -A+Aj, -A+Aj, A-Aj, A-Aj, -A-Aj, A-Aj, A+Aj, -A-Aj, A-Aj, A-Aj, A-Aj, A+Aj, A+Aj, A-Aj, -A-Aj, -A-Aj, A-Aj, - A-Aj, -A-Aj, -A-Aj, -A-Aj, A+Aj, -A-Aj, -A+Aj, A-Aj, -A-Aj, -A+Aj, A-Aj, -A+Aj, A-Aj, -A-Aj, A-Aj, -A+Aj, -A- Aj, -A+Aj, A-Aj, A+Aj, A-Aj, A+Aj, A-Aj, -A-Aj, -A+Aj, -A+Aj, A-Aj, A+Aj, A+Aj, -A-Aj, -A-Aj, A+Aj, A-Aj. -A+Aj, -A+Aj, -A-Aj, -A-Aj, A+Aj, -A+Aj, A-Aj |
| 5 | Polarization 1 | -A-Aj, A+Aj, A-Aj, -A+Aj, -A+Aj, A+Aj, A+Aj, -A-Aj, A-Aj, -A+Aj, -A+Aj, A-Aj, A-Aj, -A-Aj, A+Aj, A+Aj, -A+Aj, -A-Aj, A-Aj, -A-Aj, A-Aj, -A-Aj, A+Aj, -A+Aj, A+Aj, -A-Aj, -A+Aj, -A-Aj, A+Aj, -A-Aj, A+Aj, -A+Aj, -A-Aj, A+Aj, -A+Aj, A-Aj, -A+Aj, -A+Aj, -A+Aj, -A+Aj, -A-Aj, - A+Aj, -A+Aj, -A-Aj, A-Aj, A-Aj. -A-Aj, -A-Aj, -A-Aj, -A+Aj, A-Aj, -A-Aj, -A+Aj, -A-Aj, -A-Aj, A+Aj, A+Aj, A+Aj, A-Aj, A-Aj, A+Aj, A-Aj, -A+Aj, A+Aj, -A+Aj, A+Aj, A+Aj, A-Aj, -A-Aj, -A+Aj, A-Aj, A-Aj, A+Aj, -A-Aj, A+Aj, A+Aj, A-Aj, A+Aj, A-Aj, A-Aj, -A-Aj, -A+Aj, -A+Aj, - A+Aj, A+Aj, A-Aj, -A+Aj, A-Aj, -A-Aj, A+Aj, A-Aj, -A-Aj, -A-Aj, A+Aj, A-Aj, A-Aj |
| | Polarization 2 | -A+Aj, A-Aj, A+Aj, -A-Aj, -A-Aj, A-Aj, A-Aj, -A+Aj, A+Aj, -A-Aj, -A-Aj, A+Aj, A+Aj, -A+Aj, A-Aj, A-Aj, -A-Aj, -A+Aj, A+Aj. -A+Aj, A+Aj, -A+Aj, A-Aj, -A-Aj, A-Aj, -A+Aj, -A-Aj, -A+Aj, A-Aj, -A+Aj, A-Aj, -A-Aj, -A+Aj, A-Aj, -A-Aj, A+Aj, -A-Aj, -A-Aj, -A-Aj, -A-Aj, -A+Aj, -A-Aj, -A-Aj, -A+Aj, A+Aj, A+Aj, -A+Aj, -A+Aj, -A+Aj, -A-Aj, A+Aj, -A+Aj, -A-Aj, -A+Aj, - A+Aj, A-Aj, A-Aj, A-Aj, A+Aj, A+Aj, A-Aj, A+Aj, -A-Aj, A-Aj, -A-Aj, A-Aj, A-Aj, A+Aj, - A+Aj, -A-Aj, A+Aj, A+Aj, A-Aj, -A+Aj, A-Aj, A-Aj, A+Aj, A-Aj, A+Aj, A+Aj, -A+Aj, -A-Aj, - A-Aj, -A-Aj, A-Aj, A+Aj, -A-Aj, A+Aj, -A+Aj, A-Aj, A+Aj, -A+Aj, -A+Aj, A-Aj, A+Aj, A+Aj |
| 6 | Polarization 1 | -A-Aj, A+Aj, A-Aj, -A+Aj, -A+Aj, A+Aj, A+Aj, -A-Aj, A-Aj, -A+Aj, -A+Aj, A-Aj, A-Aj, -A-Aj, A+Aj, A+Aj, -A+Aj, -A-Aj, A-Aj, -A-Aj, A-Aj, -A-Aj, A+Aj, -A+Aj, A+Aj, -A-Aj, -A+Aj, -A-Aj, A+Aj, -A-Aj, A+Aj, -A+Aj, -A-Aj, A+Aj, -A+Aj, A-Aj, -A+Aj, -A+Aj, -A+Aj, -A+Aj, -A-Aj, - A+Aj, -A+Aj, -A-Aj, A-Aj, A-Aj. -A-Aj, -A-Aj, -A-Aj, -A+Aj, A-Aj, -A-Aj, -A+Aj, -A-Aj, -A-Aj, A+Aj, A+Aj, A+Aj, A-Aj, A-Aj, A+Aj, A-Aj, -A+Aj, A+Aj, -A+Aj, A+Aj, A+Aj, A-Aj, -A-Aj, -A+Aj, A-Aj, A-Aj, A+Aj, -A-Aj, A+Aj, A+Aj, A-Aj, A+Aj, A-Aj, A-Aj, -A-Aj, -A+Aj, -A+Aj, - A+Aj, A+Aj, A-Aj, -A+Aj, A-Aj, -A-Aj, A+Aj, A-Aj, -A-Aj, -A-Aj, A+Aj, A-Aj, A-Aj |
| | Polarization 2 | A-Aj, -A+Aj, -A-Aj, A+Aj, A+Aj, -A+Aj, -A+Aj, A-Aj, -A-Aj, A+Aj, A+Aj, -A-Aj, -A-Aj, A-Aj, -A+Aj, -A+Aj, A+Aj, A-Aj, -A-Aj, A-Aj, -A-Aj, A-Aj, -A+Aj, A+Aj, -A+Aj, A-Aj, A+Aj, A-Aj, - A+Aj, A-Aj, -A+Aj, A+Aj, A-Aj, -A+Aj, A+Aj, -A-Aj, A+Aj, A+Aj, A+Aj, A+Aj, A-Aj, A+Aj, A+Aj, A-Aj, -A-Aj, -A-Aj, A-Aj, A-Aj, A-Aj, A+Aj, -A-Aj, A-Aj, A+Aj, A-Aj, A-Aj, -A+Aj, - A+Aj, -A+Aj, -A-Aj, -A-Aj, -A+Aj, -A-Aj, A+Aj, -A+Aj, A+Aj, -A+Aj, -A+Aj, -A-Aj, A-Aj, A+Aj, -A-Aj, -A-Aj, -A+Aj, A-Aj, -A+Aj, -A+Aj, -A-Aj, -A+Aj, -A-Aj, -A-Aj, A-Aj, A+Aj, A+Aj, A+Aj, -A+Aj, -A-Aj, A+Aj, -A-Aj, A-Aj, -A+Aj, -A-Aj, A-Aj, A-Aj, -A+Aj, -A-Aj, -A-Aj |

(continued)

| Index | Polarization | Pilot sequence |
|---|---|---|
| 7 | Polarization 1 | -A+Aj, A-Aj, A+Aj, -A-Aj, -A-Aj, A-Aj, A-Aj, -A+Aj, A+Aj, -A-Aj, -A-Aj, A+Aj, A+Aj, -A+Aj, A-Aj, A-Aj, -A-Aj, -A+Aj, A+Aj. -A+Aj, A+Aj, -A+Aj, A-Aj, -A-Aj, A-Aj, -A+Aj, -A-Aj, -A+Aj, A-Aj, -A+Aj, A-Aj, -A-Aj, -A+Aj, A-Aj, -A-Aj, A+Aj, -A-Aj, -A-Aj, -A-Aj, -A-Aj, -A+Aj, -A-Aj, -A-Aj, -A+Aj, A+Aj, A+Aj, -A+Aj, -A+Aj, -A+Aj, -A-Aj, A+Aj, -A+Aj, -A-Aj, -A+Aj, - A+Aj, A-Aj, A-Aj, A-Aj, A+Aj, A+Aj, A-Aj, A+Aj, -A-Aj, A-Aj, -A-Aj, A-Aj, A-Aj, A+Aj, - A+Aj, -A-Aj, A+Aj, A+Aj, A-Aj, -A+Aj, A-Aj, A-Aj, A+Aj, A-Aj, A+Aj, A+Aj, -A+Aj, -A-Aj, - A-Aj, -A-Aj, A-Aj, A+Aj, -A-Aj, A+Aj, -A+Aj, A-Aj, A+Aj, -A+Aj, -A+Aj, A-Aj, A+Aj, A+Aj |
| | Polarization 2 | A+Aj, -A-Aj, -A+Aj, A-Aj, A-Aj. -A-Aj, -A-Aj, A+Aj, -A+Aj, A-Aj, A-Aj, -A+Aj, -A+Aj, A+Aj, -A-Aj, -A-Aj, A-Aj, A+Aj, -A+Aj, A+Aj, -A+Aj, A+Aj, -A-Aj, A-Aj, -A-Aj, A+Aj, A-Aj, A+Aj, - A-Aj, A+Aj, -A-Aj, A-Aj, A+Aj, -A-Aj, A-Aj, -A+Aj, A-Aj, A-Aj, A-Aj, A-Aj, A+Aj, A-Aj, A-Aj, A+Aj, -A+Aj, -A+Aj, A+Aj, A+Aj, A+Aj, A-Aj, -A+Aj, A+Aj, A-Aj, A+Aj, A+Aj, -A-Aj, -A-Aj, -A-Aj, -A+Aj, -A+Aj, -A-Aj, -A+Aj, A-Aj, -A-Aj, A-Aj, -A-Aj, -A-Aj, -A+Aj, A+Aj, A-Aj, - A+Aj, -A+Aj, -A-Aj, A+Aj, -A-Aj, -A-Aj, -A+Aj, -A-Aj, -A+Aj, -A+Aj, A+Aj, A-Aj, A-Aj, A-Aj, -A-Aj, -A+Aj, A-Aj, -A+Aj, A+Aj, A-Aj, A+Aj, A+Aj, -A-Aj, -A+Aj, -A+Aj |
| 8 | Polarization 1 | A-Aj, -A+Aj, -A-Aj, A+Aj, A+Aj, -A+Aj, -A+Aj, A-Aj, -A-Aj, A+Aj, A+Aj, -A-Aj, -A-Aj, A-Aj, -A+Aj, -A+Aj, A+Aj, A-Aj, -A-Aj, A-Aj, -A-Aj, A-Aj, -A+Aj, A+Aj, -A+Aj, A-Aj, A+Aj, A-Aj, - A+Aj, A-Aj, -A+Aj, A+Aj, A-Aj, -A+Aj, A+Aj, -A-Aj, A+Aj, A+Aj, A+Aj, A+Aj, A-Aj, A+Aj, A+Aj, A-Aj, -A-Aj, -A-Aj, A-Aj, A-Aj, A-Aj, A+Aj, -A-Aj, A-Aj, A+Aj, A-Aj, A-Aj, -A+Aj, - A+Aj, -A+Aj, -A-Aj, -A-Aj, -A+Aj, -A-Aj, A+Aj, -A+Aj, A+Aj, -A+Aj, -A+Aj, -A-Aj, A-Aj, A+Aj, -A-Aj, -A-Aj, -A+Aj, A-Aj, -A+Aj, -A+Aj, -A-Aj, -A+Aj, -A-Aj, -A-Aj, A-Aj, A+Aj, A+Aj, A+Aj, -A+Aj, -A-Aj, A+Aj, -A-Aj, A-Aj, -A+Aj, -A-Aj, A-Aj, A-Aj, -A+Aj, -A-Aj, -A-Aj |
| | Polarization 2 | A+Aj, -A-Aj, -A+Aj, A-Aj, A-Aj. -A-Aj, -A-Aj, A+Aj, -A+Aj, A-Aj, A-Aj, -A+Aj, -A+Aj, A+Aj, -A-Aj, -A-Aj, A-Aj, A+Aj, -A+Aj, A+Aj, -A+Aj, A+Aj, -A-Aj, A-Aj, -A-Aj, A+Aj, A-Aj, A+Aj, - A-Aj, A+Aj, -A-Aj, A-Aj, A+Aj, -A-Aj, A-Aj, -A+Aj, A-Aj, A-Aj, A-Aj, A-Aj, A+Aj, A-Aj, A-Aj, A+Aj, -A+Aj, -A+Aj, A+Aj, A+Aj, A+Aj, A-Aj, -A+Aj, A+Aj, A-Aj, A+Aj, A+Aj, -A-Aj, -A-Aj, -A-Aj, -A+Aj, -A+Aj, -A-Aj, -A+Aj, A-Aj, -A-Aj, A-Aj, -A-Aj, -A-Aj, -A+Aj, A+Aj, A-Aj, - A+Aj, -A+Aj, -A-Aj, A+Aj, -A-Aj, -A-Aj, -A+Aj, -A-Aj, -A+Aj, -A+Aj, A+Aj, A-Aj, A-Aj, A-Aj, -A-Aj, -A+Aj, A-Aj, -A+Aj, A+Aj, A-Aj, A+Aj, A+Aj, -A-Aj, -A+Aj, -A+Aj |
| 9 | Polarization 1 | A-Aj, -A+Aj, A+Aj, A+Aj, A+Aj, A-Aj, -A-Aj, A+Aj, A+Aj, -A-Aj, A-Aj, A-Aj, -A-Aj, -A-Aj, A-Aj, -A-Aj, -A+Aj, -A+Aj, -A+Aj, -A+Aj, A-Aj, -A-Aj, A-Aj, A+Aj, -A+Aj, A-Aj, -A-Aj, A-Aj, - A-Aj, -A+Aj, A-Aj, -A+Aj, -A+Aj, A+Aj, A+Aj, -A+Aj, -A+Aj, A-Aj, A-Aj, A+Aj, A+Aj, -A-Aj, A+Aj, A+Aj, -A-Aj, -A-Aj, -A-Aj, -A-Aj, -A+Aj, A-Aj, -A-Aj, -A-Aj, A+Aj, A+Aj, A+Aj, -A+Aj, A-Aj, -A+Aj, A-Aj, A-Aj, -A+Aj. -A-Aj, A-Aj, A-Aj, A+Aj, A+Aj, A-Aj, -A+Aj, A+Aj, -A+Aj, - A-Aj, -A-Aj, -A+Aj, A+Aj, -A-Aj, A-Aj, A+Aj, -A+Aj, -A-Aj, A-Aj, A-Aj, -A+Aj, -A+Aj, A-Aj, - A-Aj, A+Aj, -A+Aj, -A+Aj, A-Aj, A+Aj, -A+Aj, A+Aj, -A-Aj, -A-Aj, -A-Aj, A+Aj |
| | Polarization 2 | A+Aj, A+Aj, -A+Aj, A+Aj, A-Aj, -A-Aj, A-Aj, A-Aj, -A-Aj, A-Aj, -A-Aj, -A-Aj, -A-Aj, -A+Aj, - A+Aj, -A-Aj, -A-Aj, A-Aj, -A-Aj, -A-Aj, A+Aj, -A+Aj, -A+Aj, -A+Aj, A+Aj, -A+Aj, A-Aj, A+Aj, A+Aj, A-Aj, -A-Aj, -A+Aj, -A+Aj, -A-Aj, A+Aj, A-Aj, -A-Aj, -A+Aj, -A-Aj, A-Aj, A+Aj, A-Aj, A+Aj, A-Aj, A+Aj, A+Aj, -A+Aj, A+Aj, -A+Aj, -A-Aj, A-Aj, A+Aj, A+Aj, -A+Aj, A-Aj, A+Aj, -A- Aj, A-Aj, -A-Aj, -A-Aj, A-Aj, A+Aj, -A+Aj, -A+Aj, -A-Aj, A-Aj, -A+Aj, A-Aj, -A+Aj, A+Aj, A-Aj, A+Aj, -A-Aj, -A-Aj. -A+Aj, -A-Aj, A+Aj, A-Aj, A-Aj, A+Aj, -A-Aj, A+Aj, A+Aj, A-Aj, A-Aj, -A-Aj, -A+Aj, -A+Aj, A-Aj, -A+Aj, A-Aj, -A+Aj, -A+Aj, -A-Aj, A+Aj, -A+Aj |

(continued)

| Index | Polarization | Pilot sequence |
|---|---|---|
| 10 | Polarization 1 | A+Aj, A+Aj, -A+Aj, A+Aj, A-Aj, -A-Aj, A-Aj, A-Aj, -A-Aj, A-Aj, -A-Aj, -A-Aj, -A+Aj, -A+Aj, -A-Aj, -A-Aj, A-Aj, -A-Aj, -A-Aj, A+Aj, -A+Aj, -A+Aj, -A+Aj, A+Aj, -A+Aj, A-Aj, A+Aj, A+Aj, A-Aj, -A-Aj, -A+Aj, -A+Aj, -A-Aj, A+Aj, A-Aj, -A-Aj, -A+Aj, -A-Aj, A-Aj, A+Aj, A-Aj, A+Aj, A-Aj, A+Aj, A+Aj, -A+Aj, A+Aj, -A+Aj, -A-Aj, A-Aj, A+Aj, A+Aj, -A+Aj, A-Aj, A+Aj, -A-Aj, A-Aj, -A-Aj, -A-Aj, A-Aj, A+Aj, -A+Aj, -A+Aj, -A-Aj, A-Aj, -A+Aj, A-Aj, -A+Aj, A+Aj, A-Aj, A+Aj, -A-Aj, -A-Aj. -A+Aj, -A-Aj, A+Aj, A-Aj, A-Aj, A+Aj, -A-Aj, A+Aj, A+Aj, A-Aj, A-Aj, -A-Aj, -A+Aj, -A+Aj, A-Aj, -A+Aj, A-Aj, -A+Aj, -A+Aj, -A-Aj, A+Aj, -A+Aj |
| | Polarization 2 | A+Aj, A+Aj, A+Aj, A-Aj, -A-Aj, A+Aj, A+Aj, -A-Aj, A-Aj, A-Aj, -A-Aj, -A-Aj, A-Aj, -A-Aj, - A+Aj, -A+Aj, -A+Aj, -A+Aj, A-Aj, -A-Aj, A-Aj, A+Aj, -A+Aj, A-Aj, -A-Aj, A-Aj, -A-Aj, -A+Aj, A-Aj, -A+Aj, -A+Aj, A+Aj, A+Aj, -A+Aj, -A+Aj, A-Aj, A-Aj, A+Aj, A+Aj, -A-Aj, A+Aj, A+Aj, -A-Aj, -A-Aj, -A-Aj, -A-Aj, -A+Aj, A-Aj, -A-Aj, -A-Aj, A+Aj, A+Aj, A+Aj, -A+Aj, A-Aj, - A+Aj, A-Aj, A-Aj, -A+Aj, -A-Aj. A-Aj, A-Aj, A+Aj, A+Aj, A-Aj, -A+Aj, A+Aj, -A+Aj, -A-Aj, - A-Aj, -A+Aj, A+Aj, -A-Aj, A-Aj. A+Aj, -A+Aj, -A-Aj, A-Aj, A-Aj, -A+Aj, -A+Aj, A-Aj, -A-Aj, A+Aj, -A+Aj, -A+Aj, A-Aj, A+Aj, -A+Aj, A+Aj, -A-Aj, -A-Aj, -A-Aj, A+Aj, -A+Aj, A-Aj |
| 11 | Polarization 1 | -A+Aj, A-Aj, A+Aj, -A-Aj, -A-Aj, -A-Aj, A+Aj, A-Aj, A+Aj, -A+Aj, A-Aj, A-Aj, A+Aj, -A-Aj, - A+Aj, A-Aj, A-Aj, -A+Aj, -A+Aj, -A-Aj, A-Aj, A+Aj, -A+Aj, -A-Aj, A+Aj, A-Aj, -A-Aj, -A-Aj, A-Aj, A+Aj, A-Aj, -A+Aj, A+Aj, A+Aj, -A+Aj, -A+Aj, -A-Aj, A-Aj, -A+Aj, -A+Aj, A-Aj, -A+Aj, A-Aj, A+Aj, A+Aj, A+Aj, -A-Aj, -A-Aj, -A+Aj, A-Aj, -A-Aj, -A-Aj, -A-Aj, -A-Aj, A+Aj, A+Aj, - A-Aj, A+Aj, A+Aj, -A+Aj, -A+Aj, A-Aj, A-Aj, A+Aj, A+Aj, A-Aj, A-Aj, -A+Aj, A-Aj, -A-Aj, - A+Aj, -A-Aj, -A+Aj, A-Aj, A+Aj, -A+Aj, -A-Aj, -A+Aj, A-Aj, A-Aj, A-Aj, A-Aj, -A-Aj, -A+Aj, - A-Aj, -A-Aj, -A+Aj, -A+Aj, -A-Aj, A+Aj, A+Aj, -A-Aj, -A+Aj, A+Aj, A+Aj, A+Aj |
| | Polarization 2 | A-Aj, A+Aj, -A-Aj, A-Aj, A-Aj, -A+Aj, A-Aj, -A+Aj, A-Aj, A-Aj, -A-Aj, -A+Aj, -A+Aj, A+Aj, A+Aj, -A-Aj, A+Aj, -A+Aj, -A+Aj, A+Aj, -A-Aj, A-Aj, -A-Aj, -A-Aj, A+Aj, -A+Aj, A+Aj, A-Aj, -A+Aj, A-Aj, -A+Aj, -A-Aj, A-Aj, A-Aj, A+Aj, -A+Aj, -A-Aj, -A-Aj, -A+Aj, -A-Aj, A+Aj, - A+Aj, A-Aj, A+Aj, A+Aj, -A+Aj, -A-Aj, A-Aj, A+Aj, A-Aj, A+Aj, A+Aj, -A+Aj, A+Aj, -A+Aj, A+Aj, -A+Aj, -A-Aj, A-Aj, -A-Aj, -A+Aj, A+Aj, -A-Aj, A-Aj, A-Aj, -A-Aj, -A+Aj, A+Aj, A+Aj, -A+Aj, A-Aj, A+Aj, A-Aj, A-Aj, A-Aj, A+Aj, -A-Aj, -A-Aj, -A+Aj, -A-Aj, -A-Aj, A-Aj, A-Aj, - A-Aj, -A-Aj, -A-Aj, -A+Aj, -A-Aj, -A+Aj, -A+Aj, -A-Aj, -A+Aj, A+Aj, A-Aj, A+Aj, A+Aj |
| 12 | Polarization 1 | A-Aj, A+Aj, -A-Aj, A-Aj, A-Aj, -A+Aj, A-Aj, -A+Aj, A-Aj, A-Aj, -A-Aj, -A+Aj, -A+Aj, A+Aj, A+Aj, -A-Aj, A+Aj, -A+Aj, -A+Aj, A+Aj, -A-Aj, A-Aj, -A-Aj, -A-Aj, A+Aj, -A+Aj, A+Aj, A-Aj, -A+Aj, A-Aj, -A+Aj, -A-Aj, A-Aj, A-Aj, A+Aj, -A+Aj, -A-Aj, -A-Aj, -A+Aj, -A-Aj, A+Aj, - A+Aj, A-Aj, A+Aj, A+Aj, -A+Aj, -A-Aj, A-Aj, A+Aj, A-Aj, A+Aj, A+Aj, -A+Aj, A+Aj, -A+Aj, A+Aj, -A+Aj, -A-Aj, A-Aj, -A-Aj, -A+Aj, A+Aj, -A-Aj, A-Aj, A-Aj, -A-Aj, -A+Aj, A+Aj, A+Aj, -A+Aj, A-Aj, A+Aj, A-Aj, A-Aj, A-Aj, A+Aj, -A-Aj, -A-Aj, -A+Aj, -A-Aj, -A-Aj, A-Aj, A-Aj, - A-Aj, -A-Aj, -A-Aj, -A+Aj, -A-Aj, -A+Aj, -A+Aj, -A-Aj, -A+Aj, A+Aj, A-Aj, A+Aj, A+Aj |
| | Polarization 2 | A+Aj, -A-Aj, -A-Aj, -A-Aj, A+Aj, A-Aj, A+Aj, -A+Aj, A-Aj, A-Aj, A+Aj, -A-Aj, -A+Aj, A-Aj, A-Aj, -A+Aj, -A+Aj, -A-Aj, A-Aj, A+Aj, -A+Aj, -A-Aj, A+Aj, A-Aj, -A-Aj, -A-Aj, A-Aj, A+Aj, A-Aj, -A+Aj, A+Aj, A+Aj, -A+Aj, -A+Aj, -A-Aj, A-Aj, -A+Aj, -A+Aj, A-Aj, -A+Aj, A-Aj, A+Aj, A+Aj, A+Aj, -A-Aj, -A-Aj, -A+Aj, A-Aj, -A-Aj, -A-Aj, -A-Aj, -A-Aj, A+Aj, A+Aj, -A-Aj, A+Aj, A+Aj, -A+Aj, -A+Aj, A-Aj, A-Aj, A+Aj, A+Aj, -A-Aj, A-Aj, -A+Aj, A-Aj, -A-Aj, -A+Aj, -A-Aj, - A+Aj, A-Aj, A+Aj, -A+Aj, -A-Aj, -A+Aj, A-Aj, A-Aj, A-Aj, A-Aj, -A-Aj, -A+Aj, -A-Aj, -A-Aj, - A+Aj, -A+Aj, -A-Aj, A+Aj, A+Aj, -A-Aj, -A+Aj, A+Aj, A+Aj, A+Aj, A-Aj, -A+Aj |

**Table 29-2**

| Index | Polarization | Pilot sequence |
|-------|--------------|----------------|
| 1 | Polarization 1 | -A-Aj, A-Aj, A-Aj, A+Aj, A-Aj, -A+Aj, -A+Aj, -A-Aj, -A-Aj, -A-Aj, A+Aj, -A+Aj, A-Aj, A+Aj, - A-Aj, A-Aj, A+Aj, -A-Aj, A-Aj, -A-Aj, A-Aj, A-Aj, A+Aj, -A+Aj, A+Aj, -A+Aj, A+Aj, A+Aj, - A+Aj, -A+Aj, A+Aj, A-Aj, A+Aj, A-Aj, A-Aj, -A-Aj, A-Aj, A+Aj, -A-Aj, -A+Aj, A-Aj, A-Aj, - A+Aj, -A-Aj, -A-Aj, -A+Aj, A+Aj, A+Aj, A+Aj, A+Aj, -A+Aj, -A-Aj, -A-Aj, A-Aj, A-Aj, -A+Aj, -A-Aj, A+Aj, A+Aj, A+Aj, -A-Aj, -A-Aj, A-Aj, A+Aj, A-Aj, -A-Aj, A-Aj, -A-Aj, -A+Aj, A+Aj, - A+Aj, A-Aj, A+Aj, A+Aj, -A-Aj, A+Aj, A+Aj, -A+Aj, -A+Aj, -A-Aj, -A-Aj, A+Aj, -A+Aj, - A+Aj, -A+Aj, -A-Aj, -A+Aj, -A-Aj, -A+Aj, -A-Aj, A-Aj, A-Aj, A-Aj, -A+Aj, -A+Aj, -A-Aj |
| | Polarization 2 | A+Aj, -A-Aj, -A-Aj, A+Aj, A+Aj, -A-Aj, -A+Aj, A-Aj, -A+Aj, A+Aj, -A-Aj, A+Aj, A-Aj, A-Aj, - A+Aj, -A+Aj, A+Aj, -A+Aj, A-Aj, -A-Aj, -A+Aj, -A-Aj, -A-Aj, -A-Aj, -A-Aj, A+Aj, A-Aj, -A-Aj, A+Aj, A+Aj, -A+Aj, A-Aj, A-Aj, -A-Aj, -A-Aj, A-Aj, -A-Aj, A+Aj, A-Aj, -A+Aj, -A-Aj, A+Aj, -A-Aj, -A+Aj, -A-Aj, A+Aj, -A-Aj, -A-Aj, A-Aj, A-Aj, -A-Aj, A+Aj, A+Aj, A-Aj, - A-Aj, A-Aj, A+Aj, A+Aj, A+Aj, A-Aj, -A+Aj, A-Aj, -A+Aj, A-Aj, A+Aj, A+Aj, A+Aj, -A+Aj, A+Aj, A-Aj, A-Aj, -A+Aj, A-Aj, -A+Aj, -A+Aj, -A+Aj, A+Aj, -A-Aj, A-Aj, A-Aj, -A-Aj, -A-Aj, - A+Aj, A-Aj, A+Aj, -A+Aj, A-Aj, -A+Aj, -A+Aj, A-Aj, -A+Aj, -A-Aj, -A+Aj, -A+Aj, -A+Aj |
| 2 | Polarization 1 | -A-Aj, A-Aj, A-Aj, -A+Aj, -A+Aj, -A+Aj, -A-Aj, A-Aj, -A-Aj, A-Aj, -A-Aj, A-Aj, A-Aj, A-Aj, A+Aj, -A-Aj, -A-Aj, A-Aj, A-Aj, A+Aj, A+Aj, -A-Aj, A+Aj, A+Aj, -A+Aj, A-Aj, A+Aj, A-Aj, - A-Aj, -A+Aj, -A-Aj, -A+Aj, A+Aj, -A+Aj, -A-Aj, -A-Aj, A+Aj, A+Aj, A+Aj, -A-Aj, A-Aj, - A+Aj, -A+Aj, -A-Aj, -A-Aj, A-Aj, A+Aj, A+Aj, A+Aj, A+Aj, A-Aj, -A-Aj, -A-Aj, A-Aj, -A+Aj, - A+Aj, A-Aj, -A-Aj, A+Aj, -A+Aj, -A-Aj, -A+Aj, -A+Aj, A+Aj, -A+Aj, A+Aj, A-Aj, A-Aj, A+Aj, A+Aj, A-Aj, A+Aj, A-Aj, A+Aj, -A+Aj, -A+Aj, -A-Aj, -A+Aj, -A-Aj, A+Aj, -A+Aj, -A-Aj, A+Aj, -A-Aj, -A-Aj, -A-Aj, A-Aj, A-Aj, -A+Aj, A+Aj, -A+Aj, -A+Aj, -A-Aj |
| | Polarization 2 | A-Aj, A-Aj, A-Aj, -A-Aj, A-Aj, -A+Aj, A-Aj, A-Aj, -A+Aj, A-Aj, A+Aj, -A+Aj, A-Aj, -A-Aj, -A-Aj, -A+Aj, -A+Aj, -A-Aj, A+Aj, A-Aj, A-Aj, A-Aj, -A+Aj, A-Aj, -A+Aj, -A+Aj, A+Aj, A-Aj, A+Aj, A+Aj, A+Aj, -A+Aj, A-Aj, -A+Aj, A-Aj, -A+Aj, A+Aj, A+Aj, A+Aj, -A+Aj, -A-Aj, - A+Aj, A+Aj, A+Aj, -A-Aj, -A+Aj, -A+Aj, -A-Aj, -A+Aj, A-Aj, A+Aj, -A-Aj, A-Aj, -A-Aj, A+Aj, -A-Aj, A-Aj, -A+Aj, A+Aj, -A-Aj, -A+Aj, -A-Aj, -A-Aj, -A+Aj, -A+Aj, A-Aj, A+Aj, A+Aj, -A-Aj, -A+Aj, A+Aj, -A-Aj, -A-Aj, -A-Aj, -A-Aj, A-Aj, -A-Aj, -A+Aj, A-Aj, A+Aj, A-Aj, A-Aj, - A+Aj, -A+Aj, A+Aj, -A-Aj, A+Aj, A-Aj, -A+Aj, A-Aj, -A-Aj, A+Aj, A+Aj, -A-Aj, -A-Aj, A+Aj |
| 3 | Polarization 1 | -A-Aj, -A-Aj, -A+Aj, -A-Aj, -A-Aj, A-Aj, -A-Aj, A-Aj, A+Aj, -A-Aj, -A+Aj, A-Aj, A+Aj, -A+Aj, -A-Aj, A+Aj, -A+Aj, A-Aj, -A+Aj, A-Aj, A+Aj, A+Aj, -A-Aj, -A-Aj, A+Aj, A-Aj, A+Aj, A+Aj, A-Aj, -A-Aj, -A-Aj, -A-Aj, A+Aj, -A+Aj, A+Aj, -A+Aj, A+Aj, -A-Aj, A+Aj, -A+Aj, -A-Aj, - A+Aj, -A+Aj, -A+Aj, A+Aj, A-Aj, -A+Aj, A-Aj, -A+Aj, A+Aj, A+Aj, A-Aj, A+Aj, -A-Aj, A-Aj, A-Aj, -A+Aj, -A-Aj, -A-Aj, -A-Aj, -A-Aj, -A+Aj, -A+Aj, -A-Aj, A+Aj, A+Aj, A-Aj, A-Aj, -A-Aj, A+Aj, -A+Aj, -A+Aj, -A+Aj, -A-Aj, A-Aj, A+Aj, A+Aj, -A+Aj, -A-Aj, A-Aj, -A+Aj, A+Aj, A-Aj, A-Aj, A-Aj, A+Aj, A-Aj, A+Aj, -A+Aj, A-Aj, A+Aj, A-Aj, -A-Aj, -A+Aj, -A-Aj, A-Aj |
| | Polarization 2 | -A+Aj, -A+Aj, -A-Aj, -A+Aj, -A+Aj, A+Aj, -A+Aj, A+Aj, A-Aj, -A+Aj, -A-Aj, A+Aj, A-Aj, -A-Aj, -A+Aj, A-Aj, -A-Aj, A+Aj, -A-Aj, A+Aj, A-Aj, A-Aj, -A+Aj, -A+Aj, A-Aj, A+Aj, A-Aj, -A-Aj, A+Aj, -A+Aj, -A+Aj, -A+Aj, A-Aj, -A-Aj, A-Aj, -A-Aj, A-Aj, -A+Aj, A-Aj, -A-Aj, -A+Aj, -A-Aj, -A-Aj, -A-Aj, A-Aj, A+Aj, -A-Aj, A+Aj, -A-Aj, A-Aj, A-Aj, A+Aj, A-Aj, -A+Aj, A+Aj, A+Aj, -A-Aj, -A+Aj, -A+Aj, -A+Aj, -A+Aj, -A-Aj, -A-Aj, -A+Aj, A-Aj, A-Aj, A+Aj, A+Aj, -A+Aj, A-Aj, -A-Aj, -A-Aj, -A-Aj, -A+Aj, A+Aj, A-Aj, A-Aj, -A-Aj, -A+Aj, A+Aj, -A-Aj, A-Aj, A+Aj, A+Aj, A+Aj, A-Aj, A+Aj, A-Aj, -A-Aj, A+Aj, A-Aj, A+Aj, -A+Aj, -A-Aj, -A+Aj, A+Aj |

(continued)

| Index | Polarization | Pilot sequence |
|---|---|---|
| 4 | Polarization 1 | -A-Aj, -A-Aj, -A+Aj, -A-Aj, -A-Aj, A-Aj, -A-Aj, A-Aj, A+Aj, -A-Aj, -A+Aj, A-Aj, A+Aj, -A+Aj, -A-Aj, A+Aj, -A+Aj, A-Aj, -A+Aj, A-Aj, A+Aj, A+Aj, -A-Aj, -A-Aj, A+Aj, A-Aj, A+Aj, A+Aj, A-Aj, -A-Aj, -A-Aj, -A-Aj, A+Aj, -A+Aj, A+Aj, -A+Aj, A+Aj, -A-Aj, A+Aj, -A+Aj, -A-Aj, - A+Aj, -A+Aj, -A+Aj, A+Aj, A-Aj, -A+Aj, A-Aj, -A+Aj, A+Aj, A+Aj, A-Aj, A+Aj, -A-Aj, A-Aj, A-Aj, -A+Aj, -A-Aj, -A-Aj, -A-Aj, -A-Aj, -A+Aj, -A+Aj, -A-Aj, A+Aj, A+Aj, A-Aj, A-Aj, -A-Aj, A+Aj, -A+Aj, -A+Aj, -A+Aj, -A-Aj, A-Aj, A+Aj, A+Aj, -A+Aj, -A-Aj, A-Aj, -A+Aj, A+Aj, A-Aj, A-Aj, A-Aj, A+Aj, A-Aj, A+Aj, -A+Aj, A-Aj, A+Aj, A-Aj, -A-Aj, -A+Aj, -A-Aj, A-Aj |
| | Polarization 2 | A-Aj, A-Aj, A+Aj, A-Aj, A-Aj, -A-Aj, A-Aj, -A-Aj, -A+Aj, A-Aj, A+Aj, -A-Aj, -A+Aj, A+Aj, A-Aj, -A+Aj, A+Aj, -A-Aj, A+Aj, -A-Aj, -A+Aj, -A+Aj, A-Aj, A-Aj, -A+Aj, -A-Aj, -A+Aj, -A+Aj, -A-Aj, A-Aj, A-Aj, A-Aj, -A+Aj, A+Aj, -A+Aj, A+Aj, -A+Aj, A-Aj, -A+Aj, A+Aj, A-Aj, A+Aj, A+Aj, A+Aj, -A+Aj, -A-Aj, A+Aj, -A-Aj, A+Aj, -A+Aj, -A+Aj, -A-Aj, -A+Aj, A-Aj, -A-Aj, -A-Aj, A+Aj, A-Aj, A-Aj, A-Aj, A-Aj, A+Aj, A+Aj, A-Aj, -A+Aj, -A+Aj, -A-Aj, -A-Aj, A-Aj, -A+Aj, A+Aj, A+Aj, A+Aj, A-Aj, -A-Aj, -A+Aj, -A+Aj, A+Aj, A-Aj, -A-Aj, A+Aj, -A+Aj, -A-Aj, -A-Aj, -A-Aj, -A+Aj, -A-Aj, -A+Aj, A+Aj, -A-Aj, -A+Aj, -A-Aj, A-Aj, A+Aj, A-Aj, -A-Aj |
| 5 | Polarization 1 | A+Aj, A+Aj, A-Aj, A+Aj, A+Aj, -A+Aj, A+Aj, -A+Aj, -A-Aj, A+Aj, A-Aj, -A+Aj, -A-Aj, A-Aj, A+Aj, -A-Aj, A-Aj, -A+Aj, A-Aj, -A+Aj, -A-Aj, -A-Aj, A+Aj, A+Aj, -A-Aj, -A+Aj, -A-Aj, -A-Aj, -A+Aj, A+Aj, A+Aj, A+Aj, -A-Aj, A-Aj, -A-Aj, A-Aj, -A-Aj, A+Aj, -A-Aj, A-Aj, A+Aj, A-Aj, A-Aj, A-Aj, -A-Aj, -A+Aj, A-Aj, -A+Aj, A-Aj, -A-Aj, -A-Aj, -A+Aj, -A-Aj, A+Aj, -A+Aj, - A+Aj, A-Aj, A+Aj, A+Aj, A+Aj, A+Aj, A-Aj, A-Aj, A+Aj, -A-Aj, -A-Aj, -A+Aj, -A+Aj, A+Aj, - A-Aj, A-Aj, A-Aj, A-Aj, A+Aj, -A+Aj, -A-Aj, -A-Aj, A-Aj, A+Aj, -A+Aj, A-Aj, -A-Aj, -A+Aj, - A+Aj, -A+Aj, -A-Aj, -A+Aj, -A-Aj, A-Aj, -A+Aj, -A-Aj, -A+Aj, A+Aj, A-Aj, A+Aj, -A+Aj |
| | Polarization 2 | -A+Aj, -A+Aj, -A-Aj, -A+Aj, -A+Aj, A+Aj, -A+Aj, A+Aj, A-Aj, -A+Aj, -A-Aj, A+Aj, A-Aj, -A-Aj, -A+Aj, A-Aj, -A-Aj, A+Aj, -A-Aj, A+Aj, A-Aj, A-Aj, -A+Aj, -A+Aj, A-Aj, A+Aj, A-Aj, A-Aj, A+Aj, -A+Aj, -A+Aj, -A+Aj, A-Aj, -A-Aj, A-Aj, -A-Aj, A-Aj, -A+Aj, A-Aj, -A-Aj, -A+Aj, -A-Aj, -A-Aj, -A-Aj, A-Aj, A+Aj, -A-Aj, A+Aj, -A-Aj, A-Aj, A-Aj, A+Aj, A-Aj, -A+Aj, A+Aj, A+Aj, -A-Aj, -A+Aj, -A+Aj, -A+Aj, -A+Aj, -A-Aj, -A-Aj, -A+Aj, A-Aj, A-Aj, A+Aj, A+Aj, -A+Aj, A-Aj, -A-Aj, -A-Aj, -A-Aj, -A+Aj, A+Aj, A-Aj, A-Aj, -A-Aj, -A+Aj, A+Aj, -A-Aj, A-Aj, A+Aj, A+Aj, A+Aj, A-Aj, A+Aj, A-Aj, -A-Aj, A+Aj, A-Aj, A+Aj, -A+Aj, -A-Aj, -A+Aj, A+Aj |
| 6 | Polarization 1 | A+Aj, A+Aj, A-Aj, A+Aj, A+Aj, -A+Aj, A+Aj, -A+Aj, -A-Aj, A+Aj, A-Aj, -A+Aj, -A-Aj, A-Aj, A+Aj, -A-Aj, A-Aj, -A+Aj, A-Aj, -A+Aj, -A-Aj, -A-Aj, A+Aj, A+Aj, -A-Aj, -A+Aj, -A-Aj, -A-Aj, -A+Aj, A+Aj, A+Aj, A+Aj, -A-Aj, A-Aj, -A-Aj, A-Aj, -A-Aj, A+Aj, -A-Aj, A-Aj, A+Aj, A-Aj, A-Aj, A-Aj, -A-Aj, -A+Aj, A-Aj, -A+Aj, A-Aj, -A-Aj, -A-Aj, -A+Aj, -A-Aj, A+Aj, -A+Aj, - A+Aj, A-Aj, A+Aj, A+Aj, A+Aj, A+Aj, A-Aj, A-Aj, A+Aj, -A-Aj, -A-Aj, -A+Aj, -A+Aj, A+Aj, - A-Aj, A-Aj, A-Aj, A-Aj, A+Aj, -A+Aj, -A-Aj, -A-Aj, A-Aj, A+Aj, -A+Aj, -A-Aj, -A+Aj, - A+Aj, -A+Aj, -A-Aj, -A+Aj, -A-Aj, A-Aj, -A+Aj, -A-Aj, -A+Aj, A+Aj, A-Aj, A+Aj, -A+Aj |
| | Polarization 2 | A-Aj, A-Aj, A+Aj, A-Aj, A-Aj, -A-Aj, A-Aj, -A-Aj, -A+Aj, A-Aj, A+Aj, -A-Aj, -A+Aj, A+Aj, A-Aj, -A+Aj, A+Aj, -A-Aj, A+Aj, -A-Aj, -A+Aj, -A+Aj, A-Aj, A-Aj, -A+Aj, -A-Aj, -A+Aj, -A+Aj, -A-Aj, A-Aj, A-Aj, A-Aj, -A+Aj, A+Aj, -A+Aj, A+Aj, -A+Aj, A-Aj, -A+Aj, A+Aj, A-Aj, A+Aj, A+Aj, A+Aj, -A+Aj, -A-Aj, A+Aj, -A-Aj, A+Aj, -A+Aj, -A+Aj, -A-Aj, -A+Aj, A-Aj, -A-Aj, -A-Aj, A+Aj, A-Aj, A-Aj, A-Aj, A-Aj, A+Aj, A+Aj, A-Aj, -A+Aj, -A+Aj, -A-Aj, -A-Aj, A-Aj, -A+Aj, A+Aj, A+Aj, A+Aj, A-Aj, -A-Aj, -A+Aj, -A+Aj, A+Aj, A-Aj, -A-Aj, A+Aj, -A+Aj, -A-Aj, -A-Aj, -A-Aj, -A+Aj, -A-Aj, -A+Aj, A+Aj, -A-Aj, -A+Aj, -A-Aj, A-Aj, A+Aj, A-Aj, -A-Aj |

(continued)

| Index | Polarization | Pilot sequence |
|---|---|---|
| 7 | Polarization 1 | -A+Aj, -A-Aj, A-Aj, -A-Aj, -A+Aj. A+Aj, -A+Aj, A-Aj, A+Aj, -A+Aj, A+Aj, -A+Aj, -A+Aj, - A+Aj, A+Aj, A-Aj, -A+Aj, -A-Aj, A-Aj, A+Aj, A+Aj, -A+Aj, -A-Aj, A-Aj, A-Aj, A-Aj, A+Aj, - A-Aj, -A+Aj, -A+Aj, A+Aj, A+Aj, -A-Aj, A-Aj, A-Aj, -A-Aj, -A-Aj, -A-Aj, -A-Aj, A-Aj, -A+Aj, -A+Aj, -A-Aj, A+Aj, -A+Aj, A+Aj, A+Aj, A-Aj, -A+Aj, A-Aj, -A+Aj, A+Aj, A-Aj, A-Aj, A-Aj, - A-Aj, A-Aj, A+Aj, -A-Aj, A+Aj, A-Aj, A+Aj, A-Aj, A+Aj, -A-Aj, -A-Aj, -A-Aj, -A+Aj, A+Aj, A+Aj, -A+Aj, A+Aj, -A-Aj, -A-Aj, A+Aj, A+Aj, -A+Aj, A-Aj, -A+Aj, A-Aj, A+Aj, -A-Aj, A-Aj, A+Aj, -A+Aj, A-Aj, -A-Aj, A+Aj, -A+Aj, -A-Aj, -A+Aj, -A-Aj, -A-Aj, A-Aj, -A-Aj, -A-Aj |
| 7 | Polarization 2 | -A-Aj, -A+Aj, A+Aj, -A+Aj, -A-Aj, A-Aj, -A-Aj, A+Aj, A-Aj, -A-Aj, A-Aj, -A-Aj, -A-Aj, -A-Aj, A-Aj, A+Aj, -A-Aj, -A+Aj, A+Aj, A-Aj, A-Aj, -A-Aj, -A+Aj, A+Aj, A+Aj, A+Aj, A-Aj, -A+Aj, - A-Aj, -A-Aj, A-Aj, A-Aj, -A+Aj, A+Aj, A+Aj, -A+Aj, -A+Aj, -A+Aj, -A+Aj, A+Aj, -A-Aj, -A-Aj, -A+Aj, A-Aj, -A-Aj, A-Aj, A-Aj, A+Aj, -A-Aj, A+Aj, -A-Aj, A-Aj, A+Aj, A+Aj, A+Aj, - A+Aj, A+Aj, A-Aj, -A+Aj, A-Aj, A+Aj, A-Aj, A+Aj, A-Aj, -A+Aj, -A+Aj, -A+Aj, -A-Aj, A-Aj, A-Aj, -A-Aj, A-Aj, -A+Aj, -A+Aj, A-Aj, A-Aj, -A-Aj, A+Aj, -A-Aj, A+Aj, A-Aj, -A+Aj, A+Aj, A-Aj, -A-Aj, A+Aj, -A+Aj, A-Aj, -A-Aj, -A+Aj, -A-Aj, -A+Aj, -A+Aj, A+Aj, -A+Aj, -A+Aj |
| 8 | Polarization 1 | -A+Aj, -A-Aj, A-Aj, -A-Aj, -A+Aj. A+Aj, -A+Aj, A-Aj, A+Aj, -A+Aj, A+Aj, -A+Aj, -A+Aj, - A+Aj, A+Aj, A-Aj, -A+Aj, -A-Aj, A-Aj, A+Aj, A+Aj, -A+Aj, -A-Aj, A-Aj, A-Aj, A-Aj, A+Aj, - A-Aj, -A+Aj, -A+Aj, A+Aj, A+Aj, -A-Aj, A-Aj, A-Aj, -A-Aj, -A-Aj, -A-Aj, -A-Aj, A-Aj, -A+Aj, -A+Aj, -A-Aj, A+Aj, -A+Aj, A+Aj, A+Aj, A-Aj, -A+Aj, A-Aj, -A+Aj, A+Aj, A-Aj, A-Aj, A-Aj, - A-Aj, A-Aj, A+Aj, -A-Aj, A+Aj, A-Aj, A+Aj, A-Aj, A+Aj, -A-Aj, -A-Aj, -A-Aj, -A+Aj, A+Aj, A+Aj, -A+Aj, A+Aj, -A-Aj, -A-Aj, A+Aj, A+Aj, -A+Aj, A-Aj, -A+Aj, A-Aj, A+Aj, -A-Aj, A-Aj, A+Aj, -A+Aj, A-Aj, -A-Aj, A+Aj, -A+Aj, -A-Aj, -A+Aj, -A-Aj, -A-Aj, A-Aj, -A-Aj, -A-Aj |
| 8 | Polarization 2 | A+Aj, A-Aj, -A-Aj, A-Aj, A+Aj, -A+Aj, A+Aj, -A-Aj, -A+Aj, A+Aj, -A+Aj, A+Aj, A+Aj, A+Aj, -A+Aj, -A-Aj, A+Aj, A-Aj, -A-Aj, -A+Aj, -A+Aj, A+Aj, A-Aj, -A-Aj, -A-Aj, -A-Aj, -A+Aj, A-Aj, A+Aj, A+Aj, -A+Aj, -A+Aj, A-Aj, -A-Aj, -A-Aj, A-Aj, A-Aj, A-Aj, A-Aj, -A-Aj, A+Aj, A+Aj, A-Aj, -A+Aj, A+Aj, -A+Aj, -A+Aj, -A-Aj, A+Aj, -A-Aj, A+Aj, -A+Aj, -A-Aj, -A-Aj, -A-Aj, A-Aj, -A-Aj, -A+Aj, A-Aj, -A+Aj, -A-Aj, -A+Aj, A-Aj, A-Aj, A-Aj, A+Aj, -A+Aj, - A+Aj, A+Aj, -A+Aj, A-Aj, A-Aj, -A+Aj, -A+Aj, A+Aj, -A-Aj, A+Aj, -A-Aj, -A+Aj, A-Aj, -A-Aj, -A+Aj, A+Aj, -A-Aj, A-Aj, -A+Aj, A+Aj, A-Aj, A+Aj, A-Aj, A-Aj, -A-Aj, A-Aj, A-Aj |
| 9 | Polarization 1 | A-Aj, A+Aj, -A+Aj, A+Aj, A-Aj, -A-Aj, A-Aj, -A+Aj, -A-Aj, A-Aj, -A-Aj, A-Aj, A-Aj, A-Aj, -A-Aj, -A+Aj, A-Aj, A+Aj, -A+Aj, -A-Aj, -A-Aj, A-Aj, A+Aj, -A+Aj, -A+Aj, -A+Aj, -A-Aj, A+Aj, A-Aj, A-Aj, -A-Aj, -A-Aj, A+Aj, -A+Aj, -A+Aj, A+Aj, A+Aj, A+Aj, A+Aj, -A+Aj, A-Aj, A-Aj, A+Aj, -A-Aj, A-Aj, -A-Aj, -A-Aj, -A+Aj, A-Aj, -A+Aj, A-Aj, -A-Aj, -A+Aj, -A+Aj, -A+Aj, A+Aj, -A+Aj, -A-Aj, A+Aj, -A-Aj, -A+Aj, -A-Aj, -A+Aj, -A-Aj, A+Aj, A+Aj, A+Aj, A-Aj, -A-Aj, -A-Aj, A-Aj, -A-Aj, A+Aj, A+Aj, -A-Aj, -A-Aj, A-Aj, -A+Aj, A-Aj, -A+Aj, -A-Aj, A+Aj, - A+Aj, -A-Aj, A-Aj, -A+Aj, A+Aj, -A-Aj, A-Aj, A+Aj, A-Aj, A+Aj, A+Aj, -A+Aj, A+Aj, A+Aj |
| 9 | Polarization 2 | -A-Aj, -A+Aj, A+Aj, -A+Aj, -A+Aj, A-Aj, A-Aj, -A+Aj, A+Aj, A-Aj, -A+Aj, A+Aj, A+Aj, -A-Aj, -A+Aj, A+Aj, A+Aj, A-Aj, A-Aj, A+Aj, A-Aj, -A+Aj, -A-Aj, -A+Aj, A-Aj, -A-Aj, A+Aj, A-Aj, - A+Aj, A-Aj, A-Aj, A-Aj, -A+Aj, -A-Aj, -A-Aj, A+Aj, A-Aj, A+Aj, -A+Aj, A-Aj, A+Aj, A-Aj, A-Aj, A-Aj, A+Aj, A+Aj, -A-Aj, A-Aj, -A+Aj, -A+Aj, A+Aj, A-Aj, A-Aj, -A+Aj, -A+Aj, -A+Aj, - A+Aj, A-Aj, -A-Aj, A-Aj, A+Aj, A+Aj, A-Aj, -A+Aj, -A+Aj, -A-Aj, -A-Aj, -A-Aj, -A-Aj, -A+Aj, -A-Aj, A-Aj, A-Aj, -A+Aj, A-Aj, A+Aj, A+Aj, A+Aj, -A-Aj, A+Aj, -A-Aj, A+Aj, A+Aj, -A+Aj, - A+Aj, -A-Aj, -A+Aj, -A+Aj, A-Aj, -A+Aj, A+Aj, -A+Aj, A+Aj, -A+Aj, A-Aj, -A-Aj |

(continued)

| Index | Polarization | Pilot sequence |
|---|---|---|
| 10 | Polarization 1 | A-Aj, A+Aj, -A+Aj, A+Aj, A-Aj, -A-Aj, A-Aj, -A+Aj, -A-Aj, A-Aj, -A-Aj, A-Aj, A-Aj, A-Aj, -A-Aj, -A+Aj, A-Aj, A+Aj, -A+Aj, -A-Aj, -A-Aj, A-Aj, A+Aj, -A+Aj, -A+Aj, -A+Aj, -A-Aj, A+Aj, A-Aj, A-Aj, -A-Aj, -A-Aj, A+Aj, -A+Aj, -A+Aj, A+Aj, A+Aj, A+Aj, A+Aj, -A+Aj, A-Aj, A-Aj, A+Aj, -A-Aj, A-Aj, -A-Aj, -A-Aj, -A+Aj, A-Aj, -A+Aj, A-Aj, -A-Aj, -A+Aj, -A+Aj, -A+Aj, A+Aj, -A+Aj, -A-Aj, A+Aj, -A-Aj, -A+Aj, -A-Aj, -A+Aj, -A-Aj, A+Aj, A+Aj, A+Aj, A-Aj, -A-Aj, -A-Aj, A-Aj, -A-Aj, A+Aj, A+Aj, -A-Aj, -A-Aj, A-Aj, -A+Aj, A-Aj, -A+Aj, -A-Aj, A+Aj, - A+Aj, -A-Aj, A-Aj, -A+Aj, A+Aj, -A-Aj, A-Aj, A+Aj, A-Aj, A+Aj, A+Aj, -A+Aj, A+Aj, A+Aj |
| | Polarization 2 | A+Aj, A-Aj, -A-Aj, A-Aj, A+Aj, -A+Aj, A+Aj, -A-Aj, -A+Aj, A+Aj, -A+Aj, A+Aj, A+Aj, A+Aj, -A+Aj, -A-Aj, A+Aj, A-Aj, -A-Aj, -A+Aj, -A+Aj, A+Aj, A-Aj, -A-Aj, -A-Aj, -A-Aj, -A+Aj, A-Aj, A+Aj, A+Aj, -A+Aj, -A+Aj, A-Aj, -A-Aj, -A-Aj, A-Aj, A-Aj, A-Aj, A-Aj, -A-Aj, A+Aj, A+Aj, A-Aj, -A+Aj, A+Aj, -A+Aj, -A+Aj, -A-Aj, A+Aj, -A-Aj, A+Aj, -A+Aj, -A-Aj, -A-Aj, -A-Aj, A-Aj, -A-Aj, -A+Aj, A-Aj, -A+Aj, -A-Aj, -A+Aj, -A-Aj, -A+Aj, A-Aj, A-Aj, A-Aj, A+Aj, -A+Aj, - A+Aj, A+Aj, -A+Aj, A-Aj, A-Aj, -A+Aj, -A+Aj, A+Aj, -A-Aj, A+Aj, -A-Aj, -A+Aj, A-Aj, -A-Aj, -A+Aj, A+Aj, -A-Aj, A-Aj, -A+Aj, A+Aj, A-Aj, A+Aj, A-Aj, A-Aj, -A-Aj, A-Aj, A-Aj |

**Table 29-3**

| Index | Pilot sequence |
|---|---|
| 1 | -A-Aj, -A+Aj, A-Aj, A+Aj, -A-Aj, A+Aj, -A+Aj, A+Aj, -A+Aj, -A-Aj, -A+Aj, A+Aj, -A+Aj, A+Aj, -A-Aj, -A-Aj, A+Aj, -A+Aj, -A-Aj, -A-Aj, A+Aj, A+Aj, -A+Aj, -A+Aj, A+Aj, -A-Aj, A-Aj, A-Aj, -A-Aj, -A-Aj, A+Aj, -A-Aj, -A-Aj, A-Aj, -A+Aj, A-Aj, A-Aj, A-Aj, -A-Aj, A-Aj, A-Aj, -A+Aj, -A-Aj, -A+Aj, A-Aj, -A+Aj, -A+Aj, A-Aj, -A+Aj, -A-Aj, A-Aj, A+Aj, A-Aj, A+Aj, -A-Aj, -A+Aj, -A-Aj, A-Aj, -A+Aj, A+Aj, A-Aj, -A-Aj, A-Aj, A+Aj, -A+Aj, A-Aj, A+Aj, A+Aj, A-Aj, A-Aj, -A+Aj, A+Aj, -A-Aj, -A+Aj, A+Aj, A+Aj, A-Aj, -A+Aj, -A-Aj, -A-Aj, A-Aj, A+Aj, A+Aj, A+Aj, A-Aj, A+Aj, -A+Aj, -A+Aj, A-Aj, -A-Aj, -A-Aj, -A-Aj, -A+Aj, A+Aj, -A-Aj, A+Aj |
| 2 | -A-Aj, A+Aj, -A-Aj, -A+Aj, A-Aj, A+Aj, -A-Aj, A+Aj, -A+Aj, A+Aj, -A+Aj, -A-Aj, -A+Aj, A+Aj, -A+Aj, A+Aj, -A-Aj, -A-Aj, A+Aj, -A+Aj, -A-Aj, -A-Aj, A+Aj, A+Aj, -A+Aj, -A+Aj, A+Aj, -A-Aj, A-Aj, A-Aj, -A-Aj, -A-Aj, A+Aj, - A-Aj, -A-Aj, A-Aj, -A+Aj, A-Aj, A-Aj, A-Aj, -A-Aj, A-Aj, A-Aj, -A+Aj, -A-Aj, -A+Aj, A-Aj, -A+Aj, -A+Aj, A-Aj, - A+Aj, -A-Aj, A-Aj, A+Aj, A-Aj, A+Aj, -A-Aj, -A+Aj, -A-Aj, A-Aj, -A+Aj, A+Aj, A-Aj, -A-Aj, A-Aj, A+Aj, -A+Aj, A-Aj, A+Aj, A+Aj, A-Aj, A-Aj, -A+Aj, A+Aj, -A-Aj, -A+Aj, A+Aj, A+Aj, A-Aj, -A+Aj, -A-Aj, -A-Aj, A-Aj, A+Aj, A+Aj, A+Aj, A-Aj, A+Aj, -A+Aj, -A+Aj, A-Aj, -A-Aj, -A-Aj, -A-Aj, -A+Aj, A+Aj |
| 3 | -A-Aj, A+Aj, A-Aj, -A+Aj, -A-Aj, A+Aj, -A-Aj, A-Aj, -A-Aj, A-Aj, A+Aj, A-Aj, -A-Aj, A-Aj, -A-Aj, A+Aj, A+Aj, - A-Aj, A-Aj, A+Aj, A+Aj, -A-Aj, -A-Aj, A-Aj, A-Aj, -A-Aj, A+Aj, -A+Aj, -A+Aj, A+Aj, A+Aj, -A-Aj, A+Aj, A+Aj, - A+Aj, A-Aj, -A+Aj, -A+Aj, -A+Aj, A+Aj, -A+Aj, -A+Aj, A-Aj, A+Aj, A-Aj, -A+Aj, A-Aj, A-Aj, -A+Aj, A-Aj, A+Aj, -A+Aj, -A-Aj, -A+Aj, -A-Aj, A+Aj, A-Aj, A+Aj, -A+Aj, A-Aj, -A-Aj, -A+Aj, A+Aj, -A+Aj, -A-Aj, A-Aj, -A+Aj, -A-Aj, A-Aj, -A+Aj, -A+Aj, A-Aj, -A-Aj, A+Aj, A-Aj, -A-Aj, -A-Aj, -A+Aj, A-Aj, A+Aj, A+Aj, -A+Aj, -A-Aj, -A-Aj, - A-Aj, -A+Aj, -A-Aj, A-Aj, A-Aj, -A+Aj, A+Aj, A+Aj, A+Aj, A-Aj, -A-Aj, A+Aj |
| 4 | A+Aj, -A-Aj, -A+Aj, A-Aj, A+Aj, -A-Aj, A+Aj, -A+Aj, A+Aj, -A+Aj, -A-Aj, -A+Aj, A+Aj, -A+Aj, A+Aj, -A-Aj, -A-Aj, A+Aj, -A+Aj, -A-Aj, -A-Aj, A+Aj, A+Aj, -A+Aj, -A+Aj, A+Aj, -A-Aj, A-Aj, A-Aj, -A-Aj, -A-Aj, A+Aj, -A-Aj, - A-Aj, A-Aj, -A+Aj, A-Aj, A-Aj, A-Aj, -A-Aj, A-Aj, A-Aj, -A+Aj, -A-Aj, -A+Aj, A-Aj, -A+Aj, -A+Aj, A-Aj, -A+Aj, - A-Aj, A-Aj, A+Aj, A-Aj, A+Aj, -A-Aj, -A+Aj, -A-Aj, A-Aj, -A+Aj, A+Aj, A-Aj, -A-Aj, A-Aj, A+Aj, -A+Aj, A-Aj, A+Aj, A+Aj, A-Aj, A-Aj, -A+Aj, A+Aj, -A-Aj, -A+Aj, A+Aj, A+Aj, A-Aj, -A+Aj, -A-Aj, -A-Aj, A-Aj, A+Aj, -A+Aj, A-Aj, A+Aj, A-Aj, A+Aj, -A+Aj, -A+Aj, A-Aj, -A-Aj, -A-Aj, -A-Aj, -A+Aj, A+Aj, -A-Aj |
| 5 | A+Aj, -A-Aj, A+Aj, A-Aj, -A+Aj, -A-Aj, A+Aj, -A-Aj, A-Aj, -A-Aj, A-Aj, A+Aj, A-Aj, -A-Aj, A-Aj, -A-Aj, A+Aj, A+Aj, -A-Aj, A-Aj, A+Aj, A+Aj, -A-Aj, -A-Aj, A-Aj, A-Aj, -A-Aj, A+Aj, -A+Aj, -A+Aj, A+Aj, A+Aj, -A-Aj, A+Aj, A+Aj, -A+Aj, A-Aj, -A+Aj, -A+Aj, -A+Aj, A+Aj, -A+Aj, -A+Aj, A-Aj, A+Aj, A-Aj, -A+Aj, A-Aj, A-Aj, -A+Aj, A-Aj, A+Aj, -A+Aj, -A-Aj, -A+Aj, -A-Aj, A+Aj, A-Aj, A+Aj, -A+Aj, A-Aj, -A-Aj, -A+Aj, A+Aj, -A+Aj, -A-Aj, A-Aj, - A+Aj, -A-Aj, -A-Aj, -A+Aj, -A+Aj, A-Aj, -A-Aj, A+Aj, A-Aj, -A-Aj, -A-Aj, -A+Aj, A-Aj, A+Aj, A+Aj, -A+Aj, -A-Aj, -A-Aj, -A-Aj, -A+Aj, -A-Aj, A-Aj, A-Aj, -A+Aj, A+Aj, A+Aj, A+Aj, A-Aj, -A-Aj |

(continued)

| Index | Pilot sequence |
|---|---|
| 6 | A+Aj, A-Aj, -A+Aj, -A-Aj, A+Aj, -A-Aj, A-Aj, -A-Aj, A-Aj, A+Aj, A-Aj, -A-Aj, A-Aj, -A-Aj, A+Aj, A+Aj, -A-Aj, A-Aj, A+Aj, A+Aj, -A-Aj, -A-Aj, A-Aj, A-Aj, -A-Aj, A+Aj, -A+Aj, -A+Aj, A+Aj, A+Aj, -A-Aj, A+Aj, A+Aj, -A+Aj, A-Aj, -A+Aj, -A+Aj, -A+Aj, A+Aj, -A+Aj, -A+Aj, A-Aj, A+Aj, A-Aj, -A+Aj, A-Aj, A-Aj, -A+Aj, A-Aj, A+Aj, -A+Aj, -A-Aj, -A+Aj, -A-Aj, A+Aj, A-Aj, A+Aj, -A+Aj, A-Aj, -A-Aj, -A+Aj, A+Aj, -A+Aj, -A-Aj, A-Aj, -A+Aj, -A-Aj, -A-Aj, -A+Aj, A+Aj, A-Aj, -A-Aj, A+Aj, A-Aj, -A-Aj, -A-Aj, -A+Aj, A-Aj, A+Aj, A+Aj, -A+Aj, -A-Aj, -A-Aj, -A-Aj, -A+Aj, -A-Aj, A-Aj, A-Aj, -A+Aj, A+Aj, A+Aj, A+Aj, A-Aj, -A-Aj, A+Aj, -A-Aj |

**Table 29-4**

| Index | Pilot sequence |
|---|---|
| 1 | -A+Aj, -A-Aj, A+Aj, A-Aj, -A+Aj, A-Aj, -A-Aj, A-Aj, -A-Aj, -A+Aj, -A-Aj, A-Aj, -A-Aj, A-Aj, -A+Aj, -A+Aj, A-Aj, -A-Aj, -A+Aj, -A+Aj, A-Aj, A-Aj, -A-Aj, -A-Aj, A-Aj, -A+Aj, A+Aj, A+Aj, -A+Aj, -A+Aj, A-Aj, -A+Aj, - A+Aj, A+Aj, -A-Aj, A+Aj, A+Aj, A+Aj, -A+Aj, A+Aj, A+Aj, -A-Aj, -A+Aj, -A-Aj, A+Aj, -A-Aj, -A-Aj, A+Aj, -A-Aj, -A+Aj, A+Aj, A-Aj, A+Aj, A-Aj, -A+Aj, -A-Aj, -A+Aj, A+Aj, -A-Aj, A-Aj, A+Aj, -A+Aj, A+Aj, A-Aj, -A-Aj, A+Aj, A-Aj, A-Aj, A+Aj, A+Aj, -A-Aj, A-Aj, -A+Aj, -A-Aj, A-Aj, A-Aj, A+Aj, -A-Aj, -A+Aj, -A+Aj, A+Aj, A-Aj, A-Aj, A-Aj, A+Aj, A-Aj, -A-Aj, -A-Aj, A+Aj, -A+Aj, -A+Aj, -A+Aj, -A-Aj, A-Aj, -A+Aj, A-Aj |
| 2 | -A+Aj, A-Aj, -A+Aj, -A-Aj, A+Aj, A-Aj, -A+Aj, A-Aj, -A-Aj, A-Aj, -A-Aj, -A+Aj, -A-Aj, A-Aj, -A-Aj, A-Aj, - A+Aj, -A+Aj, A-Aj, -A-Aj, -A+Aj, -A+Aj, A-Aj, A-Aj, -A-Aj, -A-Aj, A-Aj, -A+Aj, A+Aj, A+Aj, -A+Aj, -A+Aj, A-Aj, -A+Aj, -A+Aj, A+Aj, -A-Aj, A+Aj, A+Aj, A+Aj, -A+Aj, A+Aj, A+Aj, -A-Aj, -A+Aj, -A-Aj, A+Aj, -A-Aj, -A-Aj, A+Aj, -A-Aj, -A+Aj, A+Aj, A-Aj, A+Aj, A-Aj, -A+Aj, -A-Aj, -A+Aj, A+Aj, -A-Aj, A-Aj, A+Aj, -A+Aj, A+Aj, A-Aj, -A-Aj, A+Aj, A-Aj, A-Aj, A+Aj, A+Aj, -A-Aj, A-Aj, -A+Aj, -A-Aj, A-Aj, A-Aj, A+Aj, -A-Aj, -A+Aj, -A+Aj, A+Aj, A-Aj, A-Aj, A-Aj, A+Aj, -A+Aj, -A+Aj, -A+Aj, -A-Aj, A-Aj |
| 3 | -A+Aj, A-Aj, A+Aj, -A-Aj, -A+Aj, A-Aj, -A+Aj, A+Aj, -A+Aj, A+Aj, A-Aj, A+Aj, -A+Aj, A+Aj, -A+Aj, A-Aj, A-Aj, -A+Aj, A+Aj, A-Aj, A-Aj, -A+Aj, -A+Aj, A+Aj, A+Aj, -A+Aj, A-Aj, -A-Aj, -A-Aj, A-Aj, A-Aj, -A+Aj, A-Aj, A-Aj, -A-Aj, A+Aj, -A-Aj, -A-Aj, -A-Aj, A-Aj, -A-Aj, -A-Aj, A+Aj, A-Aj, A+Aj, -A-Aj, A+Aj, A+Aj, -A-Aj, A+Aj, A-Aj, -A-Aj, -A+Aj, -A-Aj, -A+Aj, A-Aj, A+Aj, A-Aj, -A-Aj, A+Aj, -A+Aj, -A-Aj, A-Aj, -A-Aj, -A+Aj, A+Aj, -A-Aj, -A+Aj, -A+Aj, -A-Aj, -A-Aj, A+Aj, -A+Aj, A-Aj, A+Aj, -A+Aj, -A+Aj, -A-Aj, A+Aj, A-Aj, A-Aj, -A-Aj, -A+Aj, - A+Aj, -A+Aj, -A-Aj, -A+Aj, A+Aj, A+Aj, -A-Aj, A-Aj, A-Aj, A-Aj, A+Aj, -A+Aj, A-Aj |
| 4 | A-Aj, -A+Aj, -A-Aj, A+Aj, A-Aj, -A+Aj, A-Aj, -A-Aj, A-Aj, -A-Aj, -A+Aj, -A-Aj, A-Aj, -A-Aj, A-Aj, -A+Aj, - A+Aj, A-Aj, -A-Aj, -A+Aj, -A+Aj, A-Aj, A-Aj, -A-Aj, -A-Aj, A-Aj, -A+Aj, A+Aj, A+Aj, -A+Aj, -A+Aj, A-Aj, - A+Aj, -A+Aj, A+Aj, -A-Aj, A+Aj, A+Aj, A+Aj, -A+Aj, A+Aj, A+Aj, -A-Aj, -A+Aj, -A-Aj, A+Aj, -A-Aj, -A-Aj, A+Aj, -A-Aj, -A+Aj, A+Aj, A-Aj, A+Aj, A-Aj, -A+Aj, -A-Aj, -A+Aj, A+Aj, -A-Aj, A-Aj, A+Aj, -A+Aj, A+Aj, A-Aj, -A-Aj, A+Aj, A-Aj, A-Aj, A+Aj, A+Aj, -A-Aj, A-Aj, -A+Aj, -A-Aj, A-Aj, A-Aj, A+Aj, -A-Aj, -A+Aj, -A+Aj, A+Aj, A-Aj, A-Aj, -A-Aj, -A-Aj, A+Aj, -A+Aj, -A+Aj, -A+Aj, -A-Aj, A-Aj, -A+Aj |
| 5 | A-Aj, -A+Aj, A-Aj, A+Aj, -A-Aj, -A+Aj, A-Aj, -A+Aj, A+Aj, -A+Aj, A+Aj, A-Aj, A+Aj, -A+Aj, A+Aj, -A+Aj, A-Aj, A-Aj, -A+Aj, A+Aj, A-Aj, A-Aj, -A+Aj, -A+Aj, A+Aj, A+Aj, -A+Aj, A-Aj, -A-Aj, -A-Aj, A-Aj, A-Aj, -A+Aj, A-Aj, -A-Aj, A+Aj, -A-Aj, -A-Aj, -A-Aj, A-Aj, -A-Aj, -A-Aj, A+Aj, A-Aj, A+Aj, -A-Aj, A+Aj, A+Aj, -A-Aj, A+Aj, A-Aj, -A-Aj, -A+Aj, -A-Aj, -A+Aj, A-Aj, A+Aj, A-Aj, -A-Aj, A+Aj, -A+Aj, -A-Aj, A-Aj, -A-Aj, -A+Aj, A+Aj, -A-Aj, -A+Aj, -A+Aj, -A-Aj, -A-Aj, A+Aj, -A+Aj, A-Aj, A+Aj, -A+Aj, -A+Aj, -A-Aj, A+Aj, A-Aj, A-Aj, -A-Aj, -A+Aj, -A+Aj, -A-Aj, -A+Aj, A+Aj, A+Aj, -A-Aj, A-Aj, A-Aj, A-Aj, A+Aj, -A+Aj |
| 6 | A-Aj, A+Aj, -A-Aj, -A+Aj, A-Aj, -A+Aj, A+Aj, -A+Aj, A+Aj, A-Aj, A+Aj, -A+Aj, A+Aj, -A+Aj, A-Aj, A-Aj, - A+Aj, A+Aj, A-Aj, A-Aj, -A+Aj, -A+Aj, A+Aj, A+Aj, -A+Aj, A-Aj, -A-Aj, -A-Aj, A-Aj, A-Aj, -A+Aj, A-Aj, A-Aj, - A-Aj, A+Aj, -A-Aj, -A-Aj, -A-Aj, A-Aj, -A-Aj, -A-Aj, A+Aj, A-Aj, A+Aj, -A-Aj, A+Aj, A+Aj, -A-Aj, A+Aj, A-Aj, - A-Aj, -A+Aj, -A-Aj, -A+Aj, A-Aj, A+Aj, A-Aj, -A-Aj, A+Aj, -A+Aj, -A-Aj, A-Aj, -A-Aj, -A+Aj, A+Aj, -A-Aj, - A+Aj, -A+Aj, -A-Aj, A+Aj, -A+Aj, A-Aj, A+Aj, -A+Aj, -A+Aj, -A-Aj, A+Aj, A-Aj, A-Aj, -A-Aj, -A+Aj, - A+Aj, -A+Aj, -A-Aj, -A+Aj, A+Aj, A+Aj, -A-Aj, A-Aj, A-Aj, A-Aj, A+Aj, -A+Aj, A-Aj, -A+Aj |

**Table 29-5**

| Index | Pilot sequence |
|---|---|
| 1 | -A-Aj, -A+Aj, A+Aj, A+Aj, A+Aj, A-Aj, -A+Aj, -A+Aj, -A-Aj, A-Aj, -A-Aj, -A-Aj, -A-Aj, A-Aj, A+Aj, A+Aj, -A+Aj, A-Aj, -A-Aj, -A-Aj, -A+Aj, A+Aj, -A-Aj, -A+Aj, A-Aj, A-Aj, -A-Aj, -A-Aj, A-Aj, -A+Aj, -A-Aj, A-Aj, A+Aj, A-Aj, -A-Aj, -A+Aj, A-Aj, A+Aj, -A+Aj, A+Aj, -A-Aj, A-Aj, -A-Aj, A-Aj, A+Aj, -A+Aj, A-Aj, -A+Aj, -A+Aj, A-Aj, -A+Aj, A+Aj, -A+Aj, A-Aj, A-Aj, A+Aj, A-Aj, A-Aj, A-Aj, -A+Aj, A-Aj, A+Aj, A+Aj, -A-Aj, A+Aj, A+Aj, A-Aj, A-Aj, A+Aj, -A-Aj, -A+Aj, -A+Aj, -A-Aj, -A-Aj, A+Aj, A+Aj, -A+Aj, -A-Aj, A+Aj, A+Aj, -A-Aj, -A+Aj, -A-Aj, -A+Aj, A+Aj, - A+Aj, -A-Aj, -A+Aj, -A-Aj, A+Aj, -A-Aj, A-Aj, -A+Aj, A+Aj, -A-Aj, A+Aj |
| 2 | -A-Aj, A+Aj, -A-Aj, -A+Aj, A+Aj, A+Aj, A+Aj, A-Aj, -A+Aj, -A+Aj, -A-Aj, A-Aj, -A-Aj, -A-Aj, -A-Aj, A-Aj, A+Aj, A+Aj, -A+Aj, A-Aj, -A-Aj, -A-Aj, -A+Aj, A+Aj, -A-Aj, -A+Aj, A-Aj, A-Aj, -A-Aj, -A-Aj, A-Aj, -A+Aj, -A-Aj, A-Aj, A+Aj, A-Aj, -A-Aj, -A+Aj, A-Aj, A+Aj, -A+Aj, A+Aj, -A-Aj, A-Aj, -A-Aj, A-Aj, A+Aj, -A+Aj, A-Aj, -A+Aj, -A+Aj, A-Aj, -A+Aj, A+Aj, -A+Aj, A-Aj, A-Aj, A+Aj, A-Aj, A-Aj, A-Aj, -A+Aj, A-Aj, A+Aj, A+Aj, -A-Aj, A+Aj, A+Aj, A-Aj, A-Aj, A+Aj, -A-Aj, -A+Aj, -A+Aj, -A-Aj, -A-Aj, A+Aj, A+Aj, -A+Aj, -A-Aj, A+Aj, A+Aj, -A-Aj, -A+Aj, -A-Aj, -A+Aj, A+Aj, -A+Aj, -A-Aj, -A+Aj, -A-Aj, A+Aj, -A-Aj, A-Aj, -A+Aj, A+Aj |
| 3 | -A-Aj, A+Aj, A-Aj, -A-Aj, -A-Aj, -A-Aj, -A+Aj, A-Aj, A-Aj, A+Aj, -A+Aj, A+Aj, A+Aj, A+Aj, -A+Aj, -A-Aj, -A-Aj, A-Aj, -A+Aj, A+Aj, A+Aj, A-Aj, -A-Aj, A+Aj, A-Aj, -A+Aj, -A+Aj, A+Aj, A+Aj, -A+Aj, A-Aj, A+Aj, -A+Aj, -A-Aj, -A+Aj, A+Aj, A-Aj, -A+Aj, -A-Aj, A-Aj, -A-Aj, A+Aj, -A+Aj, A+Aj, -A+Aj, -A-Aj, A-Aj, -A+Aj, A-Aj, A-Aj, -A+Aj, A-Aj, -A-Aj, A-Aj, -A+Aj, -A+Aj, -A-Aj, -A+Aj, -A+Aj, -A+Aj, A-Aj, -A+Aj, -A-Aj, -A-Aj, A+Aj, -A-Aj, -A-Aj, - A+Aj, -A+Aj, -A-Aj, A+Aj, A-Aj, A-Aj, A+Aj, A+Aj, -A-Aj, -A-Aj, A-Aj, A+Aj, -A-Aj, -A-Aj, A+Aj, A-Aj, A+Aj, A-Aj, -A-Aj, A-Aj, A+Aj, A-Aj, A+Aj, -A-Aj, A+Aj, -A+Aj, A-Aj, -A-Aj, A+Aj |
| 4 | A+Aj, -A-Aj, -A+Aj, A+Aj, A+Aj, A+Aj, A-Aj, -A+Aj, -A+Aj, -A-Aj, A-Aj, -A-Aj, -A-Aj, -A-Aj, A-Aj, A+Aj, A+Aj, - A+Aj, A-Aj, -A-Aj, -A-Aj, -A+Aj, A+Aj, -A-Aj, -A+Aj, A-Aj, A-Aj, -A-Aj, -A-Aj, A-Aj, -A+Aj, -A-Aj, A-Aj, A+Aj, A-Aj, -A-Aj, -A+Aj, A-Aj, A+Aj, -A+Aj, A+Aj, -A-Aj, A-Aj, -A-Aj, A-Aj, A+Aj, -A+Aj, A-Aj, -A+Aj, -A+Aj, A-Aj, - A+Aj, A+Aj, -A+Aj, A-Aj, A-Aj, A+Aj, A-Aj, A-Aj, A-Aj, -A+Aj, A-Aj, A+Aj, A+Aj, -A-Aj, A+Aj, A+Aj, A-Aj, A-Aj, A+Aj, -A-Aj, -A+Aj, -A+Aj, -A-Aj, -A-Aj, A+Aj, A+Aj, -A+Aj, -A-Aj, A+Aj, A+Aj, -A-Aj, -A+Aj, -A-Aj, -A+Aj, A+Aj, -A+Aj, -A-Aj, -A+Aj, -A-Aj, A+Aj, -A-Aj, A-Aj, -A+Aj, A+Aj, -A-Aj |
| 5 | A+Aj, -A-Aj, A+Aj, A-Aj, -A-Aj, -A-Aj, -A-Aj, -A+Aj, A-Aj, A-Aj, A+Aj, -A+Aj, A+Aj, A+Aj, A+Aj, -A+Aj, -A-Aj, - A-Aj, A-Aj, -A+Aj, A+Aj, A+Aj, A-Aj, -A-Aj, A+Aj, A-Aj, -A+Aj, -A+Aj, A+Aj, A+Aj, -A+Aj, A-Aj, A+Aj, -A+Aj, - A-Aj, -A+Aj, A+Aj, A-Aj, -A+Aj, -A-Aj, A-Aj, -A-Aj, A+Aj, -A+Aj, A+Aj, -A+Aj, -A-Aj, A-Aj, -A+Aj, A-Aj, A-Aj, - A+Aj, A-Aj, -A-Aj, A-Aj, -A+Aj, -A+Aj, -A-Aj, -A+Aj, -A+Aj, -A+Aj, A-Aj, -A+Aj, -A-Aj, -A-Aj, A+Aj, -A-Aj, -A-Aj, -A+Aj, -A+Aj, -A-Aj, A+Aj, A-Aj, A-Aj, A+Aj, A+Aj, -A-Aj, -A-Aj, A-Aj, A+Aj, -A-Aj, -A-Aj, A+Aj, A-Aj, A+Aj, -A-Aj, A+Aj, A-Aj, -A-Aj, A-Aj, A+Aj, A-Aj, A+Aj, -A-Aj, A+Aj, -A+Aj, A-Aj, -A-Aj |
| 6 | A+Aj, A-Aj, -A-Aj, -A-Aj, -A-Aj, -A+Aj, A-Aj, A-Aj. A+Aj, -A+Aj, A+Aj, A+Aj, A+Aj, -A+Aj, -A-Aj, -A-Aj, A-Aj, - A+Aj, A+Aj, A+Aj, A-Aj, -A-Aj, A+Aj, A-Aj, -A+Aj, -A+Aj, A+Aj, A+Aj, -A+Aj, A-Aj, A+Aj, -A+Aj, -A-Aj, -A+Aj, A+Aj, A-Aj, -A+Aj, -A-Aj, A-Aj, -A-Aj, A+Aj, -A+Aj, A+Aj, -A+Aj, -A-Aj, A-Aj, -A+Aj, A-Aj, A-Aj, -A+Aj, A-Aj, - A-Aj, A-Aj, -A+Aj, -A+Aj, -A-Aj, -A+Aj, -A+Aj, -A+Aj, A-Aj, -A+Aj, -A-Aj, -A-Aj, A+Aj, -A-Aj, -A-Aj, -A+Aj, - A+Aj, -A-Aj, A+Aj, A-Aj, A-Aj, A+Aj, A+Aj, -A-Aj, -A-Aj, A-Aj, A+Aj, -A-Aj, -A-Aj, A+Aj, A-Aj, A+Aj, A-Aj, -A-Aj, A-Aj, A+Aj, A-Aj, A+Aj, -A-Aj, A+Aj, -A+Aj, A-Aj, -A-Aj, A+Aj, -A-Aj |

**Table 29-6**

| Index | Pilot sequence |
|---|---|
| 1 | -A+Aj, -A-Aj, A-Aj, A-Aj, A-Aj, A+Aj, -A-Aj, -A-Aj, -A+Aj, A+Aj, -A+Aj, -A+Aj, -A+Aj, A+Aj, A-Aj, A-Aj, -A-Aj, A+Aj, -A+Aj, -A+Aj, -A-Aj, A-Aj, -A+Aj, -A-Aj, A+Aj, A+Aj, -A+Aj, -A+Aj, A+Aj, -A-Aj, -A+Aj, A+Aj, A-Aj, A+Aj, -A+Aj, -A-Aj, A+Aj, A-Aj, -A-Aj, A-Aj, -A+Aj, A+Aj, -A+Aj, A+Aj, A-Aj, -A-Aj, A+Aj, -A-Aj, -A-Aj, A+Aj, A+Aj, A-Aj, A+Aj, A+Aj, A+Aj, -A-Aj, A+Aj, A-Aj, A-Aj, -A+Aj, A-Aj, A-Aj, A+Aj, A+Aj, A-Aj, - A+Aj, -A-Aj, -A-Aj, -A+Aj, -A+Aj, A-Aj, A-Aj, -A-Aj, -A+Aj, A-Aj, A-Aj, -A+Aj, -A-Aj, -A+Aj, -A-Aj, A-Aj, -A-Aj, - A+Aj, -A-Aj, -A+Aj, A-Aj, -A+Aj, A+Aj, -A-Aj, A-Aj, -A+Aj, A-Aj |
| 2 | -A+Aj, A-Aj, -A+Aj, -A-Aj, A-Aj, A-Aj, A-Aj, A+Aj, -A-Aj, -A-Aj, -A+Aj, A+Aj, -A+Aj, -A+Aj, -A+Aj, A+Aj, A-Aj, A-Aj, -A-Aj, A+Aj, -A+Aj, -A+Aj, -A-Aj, A-Aj, -A+Aj, -A-Aj, A+Aj, A+Aj, -A+Aj, -A+Aj, A+Aj, -A-Aj, -A+Aj, A+Aj, A-Aj, A+Aj, -A+Aj, -A-Aj, A+Aj, A-Aj, -A-Aj, A-Aj, -A+Aj, A+Aj, -A+Aj, A+Aj, A-Aj, -A-Aj, A+Aj, -A-Aj, -A-Aj, A+Aj, A+Aj, A-Aj, A+Aj, A+Aj, A+Aj, -A-Aj, A+Aj, A-Aj, A-Aj, -A+Aj, A-Aj, A-Aj, -A+Aj, A-Aj, A-Aj, A+Aj, A+Aj, A-Aj, -A+Aj, -A-Aj, -A-Aj, -A+Aj, -A+Aj, A-Aj, A-Aj, -A-Aj, -A+Aj, A-Aj, A-Aj, -A+Aj, -A-Aj, -A+Aj, -A-Aj, A-Aj, -A-Aj, -A+Aj, -A-Aj, A-Aj, -A-Aj, -A+Aj, -A-Aj, -A+Aj, A-Aj, -A+Aj, A+Aj, -A-Aj, A-Aj, -A+Aj, A-Aj |

(continued)

| Index | Pilot sequence |
|---|---|
| 3 | -A+Aj, A-Aj, A+Aj, -A+Aj, -A+Aj, -A+Aj, -A-Aj, A+Aj, A+Aj, A-Aj, -A-Aj, A-Aj, A-Aj, A-Aj, -A-Aj, -A+Aj, -A+Aj, A+Aj, -A-Aj, A-Aj, A-Aj, A+Aj, -A+Aj, A-Aj, A+Aj, -A-Aj, -A-Aj, A-Aj, A-Aj, -A-Aj, A+Aj, A-Aj, -A-Aj, -A+Aj, -A-Aj, A-Aj, A+Aj, -A-Aj, -A+Aj, A+Aj, -A+Aj, A-Aj, -A-Aj, A-Aj, -A-Aj, -A+Aj, A+Aj, -A-Aj, A+Aj, A+Aj, -A-Aj, A+Aj, -A+Aj, A+Aj, -A-Aj, -A-Aj, -A+Aj, -A-Aj, -A-Aj, -A-Aj, A+Aj, -A-Aj, -A+Aj, -A+Aj, A-Aj, -A+Aj, -A+Aj, -A-Aj, -A-Aj, -A+Aj, A-Aj, A+Aj, A+Aj, A-Aj, A-Aj, -A+Aj, -A+Aj, A+Aj, A-Aj, -A+Aj, -A+Aj, A-Aj, A+Aj, A-Aj, A+Aj, -A+Aj, A+Aj, A-Aj, A+Aj, A-Aj, -A+Aj, A-Aj, -A-Aj, A+Aj, -A+Aj, A-Aj |
| 4 | A-Aj, -A+Aj, -A-Aj, A-Aj, A-Aj, A-Aj, A+Aj, -A-Aj, -A-Aj, -A+Aj, A+Aj, -A+Aj, -A+Aj, -A+Aj, A+Aj, A-Aj, A-Aj, -A-Aj, A+Aj, -A+Aj, -A+Aj, -A-Aj, A-Aj, -A+Aj, -A-Aj, A+Aj, A+Aj, -A+Aj, -A+Aj, A+Aj, -A-Aj, -A+Aj, A+Aj, A-Aj, A+Aj, -A+Aj, -A-Aj, A+Aj, A-Aj, -A-Aj, A-Aj, -A+Aj, A+Aj, -A+Aj, A+Aj, A-Aj, -A-Aj, A+Aj, -A-Aj, -A-Aj, A+Aj, - A-Aj, A-Aj, -A-Aj, A+Aj, A+Aj, A-Aj, A+Aj, A+Aj, A+Aj, -A-Aj, A+Aj, A-Aj, A-Aj, -A+Aj, A-Aj, A-Aj, A+Aj, A+Aj, A-Aj, -A+Aj, -A-Aj, -A-Aj, -A+Aj, A+Aj, A-Aj, A-Aj, -A-Aj, -A+Aj, A-Aj, A-Aj, -A+Aj, -A-Aj, -A+Aj, -A-Aj, A-Aj, - A-Aj, -A+Aj, -A-Aj, -A+Aj, A-Aj, -A+Aj, A+Aj, -A-Aj, A-Aj, -A+Aj |
| 5 | A-Aj, -A+Aj, A-Aj, A+Aj, -A+Aj, -A+Aj, -A+Aj, -A-Aj, A+Aj, A+Aj, A-Aj, -A-Aj, A-Aj, A-Aj, A-Aj, -A-Aj, -A+Aj, - A+Aj, A+Aj, -A-Aj, A-Aj, A-Aj, A+Aj, -A+Aj, A-Aj, A+Aj, -A-Aj, -A-Aj, A-Aj, A-Aj, -A-Aj, A+Aj, A-Aj, -A-Aj, - A+Aj, -A-Aj, A-Aj, A+Aj, -A-Aj, -A+Aj, A+Aj, -A+Aj, A-Aj, -A-Aj, A-Aj, -A-Aj, -A+Aj, A+Aj, -A-Aj, A+Aj, A+Aj, - A-Aj, A+Aj, -A+Aj, A+Aj, -A-Aj, -A-Aj, -A+Aj, -A-Aj, -A-Aj, -A-Aj, A+Aj, -A-Aj, -A+Aj, -A+Aj, A-Aj, -A+Aj, - A+Aj, -A-Aj, -A-Aj, -A+Aj, A-Aj, A+Aj, A+Aj, A-Aj, A-Aj, -A+Aj, -A+Aj, A+Aj, A-Aj, -A+Aj, -A+Aj, A-Aj, A+Aj, A-Aj, A+Aj, -A+Aj, A+Aj, A-Aj, A+Aj, A-Aj, -A+Aj, A-Aj, -A-Aj, A+Aj, -A+Aj |
| 6 | A-Aj, A+Aj, -A+Aj, -A+Aj, -A+Aj, -A-Aj, A+Aj, A+Aj, A-Aj, -A-Aj, A-Aj, A-Aj, A-Aj, -A-Aj, -A+Aj, -A+Aj, A+Aj, - A-Aj, A-Aj, A-Aj, A+Aj, -A+Aj, A-Aj, A+Aj, -A-Aj, -A-Aj, A-Aj, A-Aj, -A-Aj, A+Aj, A-Aj, -A-Aj, -A+Aj, -A-Aj, A-Aj, A+Aj, -A-Aj, -A+Aj, A+Aj, -A+Aj, A-Aj, -A-Aj, A-Aj, -A-Aj, -A+Aj, A+Aj, -A-Aj, A+Aj, A+Aj, -A-Aj, A+Aj, -A+Aj, A+Aj, -A-Aj, -A-Aj, -A+Aj, -A-Aj, -A-Aj, -A-Aj, A+Aj, -A-Aj, -A+Aj, -A+Aj, A-Aj, -A+Aj, -A+Aj, -A-Aj, -A-Aj, A-Aj, - A+Aj, A-Aj, A+Aj, A+Aj, A-Aj, A-Aj, -A+Aj, -A+Aj, A+Aj, A-Aj, -A+Aj, -A+Aj, A-Aj, A+Aj, A-Aj, A+Aj, -A+Aj, A+Aj, A-Aj, A+Aj, A-Aj, -A+Aj, A-Aj, -A-Aj, A+Aj, -A+Aj, A-Aj, -A+Aj |

(23) Particularly, when $N_{PS}$ = 104, if a remainder of $N_{TS}$ divided by 4 is 1, the pilot sequence is one item in Table 30-1. If a remainder of $N_{TS}$ divided by 4 is 3, the pilot sequence is one item in Table 30-1 or Table 30-2. Alternatively, any item is selected from Table 30-3 as a pilot sequence in one polarization direction, and any item is selected from Table 30-4 as a pilot sequence in the other polarization direction. Alternatively, any item is selected from Table 30-5 as a pilot sequence in one polarization direction, and any item is selected from Table 30-6 as a pilot sequence in the other polarization direction.

**Table 30-1**

| Index | Polarization | Pilot sequence |
|---|---|---|
| 1 | Polarization 1 | -A-Aj, A-Aj, -A-Aj, -A+Aj, A+Aj, A-Aj, -A-Aj, A+Aj, -A+Aj, -A+Aj, A+Aj, A-Aj, -A+Aj, -A-Aj, A+Aj, A-Aj, -A-Aj, A-Aj, A-Aj, A+Aj, -A-Aj, -A+Aj, -A+Aj, A+Aj, -A-Aj, -A+Aj, A+Aj, A+Aj, A+Aj, -A+Aj, A-Aj, A-Aj, A+Aj, -A+Aj, A-Aj, A+Aj, -A-Aj, A+Aj, -A+Aj, -A-Aj, -A-Aj, -A-Aj, A-Aj, A+Aj, A+Aj, -A+Aj, A+Aj, -A+Aj, -A+Aj, A-Aj, -A+Aj, A+Aj, A+Aj, -A-Aj, A-Aj, A+Aj, -A+Aj, -A+Aj, -A-Aj, -A+Aj, -A-Aj, A+Aj, -A+Aj, A+Aj, A+Aj, -A+Aj, -A+Aj, -A+Aj, A-Aj, A-Aj, -A-Aj, A-Aj, A+Aj, -A-Aj, A-Aj, A-Aj, A-Aj, A+Aj, A+Aj, A-Aj, -A-Aj, -A-Aj, A-Aj, -A-Aj, -A-Aj, -A-Aj, -A-Aj, A+Aj, -A-Aj, -A+Aj, A-Aj, -A-Aj, - A+Aj, A-Aj, -A+Aj, A-Aj, -A-Aj, A-Aj, -A+Aj, -A-Aj, -A+Aj, A-Aj, A+Aj, A-Aj |
| | Polarization 2 | -A+Aj, A+Aj, -A+Aj, -A-Aj, A-Aj, A+Aj, -A+Aj, A-Aj, -A-Aj, -A-Aj, A-Aj, A+Aj, -A-Aj, -A+Aj, A-Aj, A+Aj, -A+Aj, A+Aj, A+Aj, A-Aj, -A+Aj, -A-Aj, -A-Aj, A-Aj, -A+Aj, -A-Aj, A-Aj, A-Aj, A-Aj, -A-Aj, A+Aj, A+Aj, A-Aj, -A-Aj, A+Aj, A-Aj, -A+Aj, A-Aj, -A-Aj, -A+Aj, -A+Aj, -A+Aj, A+Aj, A-Aj, A-Aj, -A-Aj, A-Aj, -A-Aj, A-Aj, -A-Aj, -A-Aj, A+Aj, -A-Aj, A-Aj, A-Aj, -A+Aj, A+Aj, A-Aj, -A-Aj, -A-Aj, -A+Aj, -A-Aj, -A+Aj, A-Aj, -A-Aj, A-Aj, A-Aj, -A-Aj, -A-Aj, -A-Aj, A+Aj, A+Aj, -A+Aj, A+Aj, A-Aj, -A+Aj, A+Aj, A+Aj, A+Aj, A-Aj, A-Aj, A+Aj, -A+Aj, -A+Aj, A+Aj, -A+Aj, -A+Aj, -A+Aj, -A+Aj, A-Aj, -A+Aj, -A-Aj, A+Aj, -A+Aj, -A-Aj, A+Aj, -A-Aj, A+Aj, -A+Aj, A+Aj, -A-Aj, -A+Aj, -A-Aj, A+Aj, A-Aj, A+Aj |

**154**

(continued)

| Index | Polarization | Pilot sequence |
|---|---|---|
| 2 | Polarization 1 | -A-Aj, A-Aj, -A-Aj, -A+Aj, A+Aj, A-Aj, -A-Aj, A+Aj, -A+Aj, -A+Aj, A+Aj, A-Aj, -A+Aj, -A-Aj, A+Aj, A-Aj, -A-Aj, A-Aj, A-Aj, A+Aj, -A-Aj, -A+Aj, -A+Aj, A+Aj, -A-Aj, -A+Aj, A+Aj, A+Aj, A+Aj, -A+Aj, A-Aj, A-Aj, A+Aj, -A+Aj, A-Aj, A+Aj, -A-Aj, A+Aj, -A+Aj, -A-Aj, -A-Aj, -A-Aj, A-Aj, A+Aj, A+Aj, -A+Aj, A+Aj, -A+Aj, -A+Aj, A-Aj, -A+Aj, A+Aj, A+Aj, -A-Aj, A-Aj, A+Aj, -A+Aj, -A+Aj, -A-Aj, -A+Aj, -A-Aj, A+Aj, -A+Aj, A+Aj, A+Aj, -A+Aj, -A+Aj, -A+Aj, A-Aj, A-Aj, -A-Aj, A-Aj, A+Aj, -A-Aj, A-Aj, A-Aj, A-Aj, A+Aj, A+Aj, A-Aj, -A-Aj, -A-Aj, A-Aj, -A-Aj, -A-Aj, -A-Aj, -A-Aj, A+Aj, -A-Aj, -A+Aj, A-Aj, -A-Aj, - A+Aj, A-Aj, -A+Aj, A-Aj, -A-Aj, A-Aj, -A+Aj, -A-Aj, -A+Aj, A-Aj, A+Aj, A-Aj |
| | Polarization 2 | A-Aj, -A-Aj, A-Aj, A+Aj, -A+Aj, -A-Aj, A-Aj, -A+Aj, A+Aj, A+Aj, -A+Aj, -A-Aj, A+Aj, A-Aj, -A+Aj, -A-Aj, A-Aj, -A-Aj, -A-Aj, -A+Aj, A-Aj, A+Aj, A+Aj, -A+Aj, A-Aj, A+Aj, -A+Aj, -A+Aj, -A+Aj, A+Aj, -A-Aj, -A-Aj, -A+Aj, A+Aj, -A-Aj, -A+Aj, A-Aj. -A+Aj, A+Aj, A-Aj, A-Aj, A-Aj, -A-Aj, -A+Aj, -A+Aj, A+Aj, - A+Aj, A+Aj, A+Aj, -A-Aj, A+Aj, -A+Aj, -A+Aj, A-Aj, -A-Aj, -A+Aj, A+Aj, A+Aj, A-Aj, A+Aj, A-Aj, - A+Aj, A+Aj, -A+Aj, -A+Aj, A+Aj, A+Aj. A+Aj, -A-Aj, -A-Aj, A-Aj, -A-Aj, -A+Aj, A-Aj, -A-Aj, -A-Aj, -A-Aj, -A+Aj, -A+Aj, -A-Aj, A-Aj, A-Aj, -A-Aj, A-Aj, A-Aj, A-Aj, -A+Aj, A-Aj, A+Aj, -A-Aj, A-Aj, A+Aj, -A-Aj, A+Aj, -A-Aj, A-Aj, -A-Aj, A+Aj, A-Aj, A+Aj, -A-Aj, -A+Aj, -A-Aj |
| 3 | Polarization 1 | -A+Aj, A+Aj, -A+Aj, -A-Aj, A-Aj, A+Aj, -A+Aj, A-Aj, -A-Aj, -A-Aj, A-Aj, A+Aj, -A-Aj, -A+Aj, A-Aj, A+Aj, -A+Aj, A+Aj, A+Aj, A-Aj, -A+Aj, -A-Aj, -A-Aj, A-Aj, -A+Aj, -A-Aj, A-Aj, A-Aj, A-Aj, -A-Aj, A+Aj, A+Aj, A-Aj, -A-Aj, A+Aj, A-Aj, -A+Aj, A-Aj, -A-Aj, -A+Aj, -A+Aj, -A+Aj, A+Aj, A-Aj, A-Aj, -A-Aj, A-Aj, -A-Aj, -A-Aj, A+Aj, -A-Aj, A-Aj, A-Aj, -A+Aj, A+Aj, A-Aj, -A-Aj, -A-Aj, -A+Aj, -A-Aj, -A+Aj, A-Aj, -A-Aj, A-Aj, A-Aj, -A-Aj, -A-Aj, -A-Aj, A+Aj, A+Aj, -A+Aj, A+Aj, A-Aj, -A+Aj, A+Aj, A+Aj, A+Aj, A-Aj, A-Aj, A+Aj, -A+Aj, -A+Aj, A+Aj, -A+Aj, -A+Aj, -A+Aj, -A+Aj, A-Aj, -A+Aj, -A-Aj, A+Aj, -A+Aj, -A-Aj, A+Aj, -A-Aj, A+Aj, -A+Aj, A+Aj, -A-Aj, -A+Aj, -A-Aj, A+Aj, A-Aj, A+Aj |
| | Polarization 2 | A+Aj, -A+Aj, A+Aj, A-Aj, -A-Aj, -A+Aj, A+Aj, -A-Aj, A-Aj, A-Aj, -A-Aj, -A+Aj, A-Aj, A+Aj, -A-Aj, - A+Aj, A+Aj, -A+Aj, -A+Aj, -A-Aj, A+Aj, A-Aj, A-Aj, -A-Aj, A+Aj, A-Aj, -A-Aj, -A-Aj, -A-Aj, A-Aj, - A+Aj, -A+Aj, -A-Aj, A-Aj, -A+Aj, -A-Aj, A+Aj, -A-Aj, A-Aj, A+Aj, A+Aj, A+Aj, -A+Aj, -A-Aj, -A-Aj, A-Aj, -A-Aj, A-Aj, -A-Aj, A-Aj, A-Aj, -A+Aj, A-Aj, -A-Aj, -A-Aj, A+Aj, -A+Aj, -A-Aj, A-Aj, A-Aj, A+Aj, A-Aj, A+Aj, -A-Aj, A-Aj, -A-Aj, -A-Aj, A-Aj, A-Aj, A-Aj, -A+Aj, -A+Aj, A+Aj, -A+Aj, -A-Aj, A+Aj, -A+Aj, -A+Aj, -A+Aj, -A-Aj, -A-Aj, -A+Aj, A+Aj, A+Aj, -A+Aj, A+Aj, A+Aj, A+Aj, A+Aj, -A-Aj, A+Aj, A-Aj, -A+Aj, A+Aj, A-Aj, -A+Aj, A-Aj, -A+Aj, A+Aj, -A+Aj, A-Aj, A+Aj, A-Aj, -A+Aj, -A-Aj, -A+Aj |
| 4 | Polarization 1 | A-Aj, -A-Aj, A-Aj, A+Aj, -A+Aj, -A-Aj, A-Aj, -A+Aj, A+Aj, A+Aj, -A+Aj, -A-Aj, A+Aj, A-Aj, -A+Aj, -A-Aj, A-Aj, -A-Aj, -A-Aj, -A+Aj, A-Aj, A+Aj, A+Aj, -A+Aj, A-Aj, A+Aj, -A+Aj, -A+Aj, -A+Aj, A+Aj, -A-Aj, -A-Aj, -A+Aj, A+Aj, -A-Aj, -A+Aj, A-Aj. -A+Aj, A+Aj, A-Aj, A-Aj, A-Aj, -A-Aj, -A+Aj, -A+Aj, A+Aj, - A+Aj, A+Aj, A+Aj, -A-Aj, A+Aj, -A+Aj, -A+Aj, A-Aj, -A-Aj, -A+Aj, A+Aj, A+Aj, A-Aj, A+Aj, A-Aj, - A+Aj, A+Aj, -A+Aj, -A+Aj, A+Aj, A+Aj. A+Aj, -A-Aj, -A-Aj, A-Aj, -A-Aj, -A+Aj, A-Aj, -A-Aj, -A-Aj, -A-Aj, -A+Aj, -A+Aj, -A-Aj, A-Aj, A-Aj, -A-Aj, A-Aj, A-Aj, A-Aj, A-Aj, -A+Aj, A-Aj, A+Aj, -A-Aj, A-Aj, A+Aj, -A-Aj, A+Aj, -A-Aj, A-Aj, -A-Aj, A+Aj, A-Aj, A+Aj, -A-Aj, -A+Aj, -A-Aj |
| | Polarization 2 | A+Aj, -A+Aj, A+Aj, A-Aj, -A-Aj, -A+Aj, A+Aj, -A-Aj, A-Aj, A-Aj, -A-Aj, -A+Aj, A-Aj, A+Aj, -A-Aj, - A+Aj, A+Aj, -A+Aj, -A+Aj, -A-Aj, A+Aj, A-Aj, A-Aj, -A-Aj, A+Aj, A-Aj, -A-Aj, -A-Aj, -A-Aj, A-Aj, - A+Aj, -A+Aj, -A-Aj, A-Aj, -A+Aj, -A-Aj, A+Aj, -A-Aj, A-Aj, A+Aj, A+Aj, A+Aj, -A+Aj, -A-Aj, -A-Aj, A-Aj, -A-Aj, A-Aj, -A-Aj, A-Aj, A-Aj, -A+Aj, A-Aj, -A-Aj, -A-Aj, A+Aj, -A+Aj, -A-Aj, A-Aj, A-Aj, A+Aj, A-Aj, A+Aj, -A-Aj, A-Aj, -A-Aj, -A-Aj, A-Aj, A-Aj, A-Aj, -A+Aj, -A+Aj, A+Aj, -A+Aj, -A-Aj, A+Aj, -A+Aj, -A+Aj, -A+Aj, -A-Aj, -A-Aj, -A+Aj, A+Aj, A+Aj, -A+Aj, A+Aj, A+Aj, A+Aj, A+Aj, -A-Aj, A+Aj, A-Aj, -A+Aj, A+Aj, A-Aj, -A+Aj, A-Aj, -A+Aj, A+Aj, -A+Aj, A-Aj, A+Aj, A-Aj, -A+Aj, -A-Aj, -A+Aj |

(continued)

| Index | Polarization | Pilot sequence |
|---|---|---|
| 5 | Polarization 1 | -A-Aj, -A-Aj, -A+Aj, -A+Aj, -A+Aj, A-Aj, -A+Aj, -A+Aj, -A-Aj, A-Aj, A-Aj, -A-Aj, -A-Aj, A-Aj, A+Aj, A-Aj, A-Aj, -A+Aj, -A+Aj, A-Aj, A+Aj, -A-Aj, A-Aj, -A-Aj, A-Aj, -A-Aj, A+Aj, A+Aj, A-Aj, -A+Aj, A-Aj, - A+Aj, A+Aj, -A+Aj, -A-Aj, -A-Aj, -A-Aj, -A-Aj, -A+Aj, A-Aj, A+Aj, -A+Aj, -A+Aj, -A+Aj, -A-Aj, -A-Aj, A+Aj, A-Aj, A-Aj, A-Aj, A+Aj, -A+Aj, A+Aj, -A-Aj, A-Aj, A-Aj, A+Aj, A-Aj, -A+Aj, A+Aj, A-Aj, A-Aj, A+Aj, -A-Aj, -A-Aj, -A+Aj, -A-Aj, A-Aj, A+Aj, A+Aj, -A+Aj, -A-Aj, A+Aj, A-Aj, A+Aj, -A+Aj, A-Aj, A+Aj, A+Aj, -A-Aj, A+Aj, A-Aj, -A-Aj, A+Aj, -A+Aj, A+Aj, A+Aj, -A-Aj, -A+Aj, A+Aj, A-Aj, -A+Aj, - A+Aj, A+Aj, -A-Aj, -A+Aj, -A-Aj, -A-Aj, A-Aj, -A+Aj, A+Aj, -A-Aj, A+Aj, -A+Aj |
| | Polarization 2 | -A+Aj, -A+Aj, -A-Aj, -A-Aj, -A-Aj, A+Aj, -A-Aj, -A-Aj, -A+Aj, A+Aj, A+Aj, -A+Aj, -A+Aj, A+Aj, A-Aj, A+Aj, A+Aj, -A-Aj, -A-Aj, A+Aj, A-Aj, -A+Aj, A+Aj, -A+Aj, A+Aj, -A+Aj, A-Aj, A-Aj, A+Aj, -A-Aj, A+Aj, -A-Aj, A-Aj, -A-Aj, -A+Aj, -A+Aj, -A+Aj, -A+Aj, -A-Aj, A+Aj, A-Aj, -A-Aj, -A-Aj, -A-Aj, -A+Aj, - A+Aj, A-Aj, A+Aj, A+Aj, A+Aj, A-Aj, -A-Aj, A-Aj, -A+Aj, A+Aj, A+Aj, A-Aj, A+Aj, -A-Aj, A-Aj, A+Aj, A+Aj, A-Aj, -A+Aj, -A+Aj, -A-Aj, -A+Aj, A+Aj, A-Aj, A-Aj, -A-Aj, -A+Aj, A-Aj, A+Aj, A-Aj, -A-Aj, A+Aj, A-Aj, A-Aj, -A+Aj, A-Aj, A+Aj, -A+Aj, A-Aj, -A-Aj, A-Aj, A-Aj, -A+Aj, -A-Aj, A-Aj, A+Aj, -A-Aj, -A-Aj, A-Aj, -A+Aj, -A-Aj, -A+Aj, -A+Aj, A+Aj, -A-Aj, A-Aj, -A+Aj, A-Aj, -A-Aj |
| 6 | Polarization 1 | -A-Aj, -A-Aj, -A+Aj, -A+Aj, -A+Aj, A-Aj, -A+Aj, -A+Aj, -A-Aj, A-Aj, A-Aj, -A-Aj, -A-Aj, A-Aj, A+Aj, A-Aj, A-Aj, -A+Aj, -A+Aj, A-Aj, A+Aj, -A-Aj, A-Aj, -A-Aj, A-Aj, -A-Aj, A+Aj, A+Aj, A-Aj, -A+Aj, A-Aj, - A+Aj, A+Aj, -A+Aj, -A-Aj, -A-Aj, -A-Aj, -A-Aj, -A+Aj, A-Aj, A+Aj, -A+Aj, -A+Aj, -A+Aj, -A-Aj, -A-Aj, A+Aj, A-Aj, A-Aj, A-Aj, A+Aj, -A+Aj, A+Aj, -A-Aj, A-Aj, A-Aj, A+Aj, A-Aj, -A+Aj, A+Aj, A-Aj, A-Aj, A+Aj, -A-Aj, -A-Aj, -A+Aj, -A-Aj, A-Aj, A+Aj, A+Aj, -A+Aj, -A-Aj, A+Aj, A-Aj, A+Aj, -A+Aj, A-Aj, A+Aj, A+Aj, -A-Aj, A+Aj, A-Aj, -A-Aj, A+Aj, -A+Aj, A+Aj, A+Aj, -A-Aj, -A+Aj, A+Aj, A-Aj, -A+Aj, - A+Aj, A+Aj, -A-Aj, -A+Aj, -A-Aj, -A-Aj, A-Aj, -A+Aj, A+Aj, -A-Aj, A+Aj, -A+Aj |
| | Polarization 2 | A-Aj, A-Aj, A+Aj, A+Aj, A+Aj, -A-Aj, A+Aj, A+Aj, A-Aj, -A-Aj, -A-Aj, A-Aj, A-Aj, -A-Aj, -A+Aj, -A-Aj, - A-Aj, A+Aj, A+Aj, -A-Aj, -A+Aj, A-Aj, -A-Aj, A-Aj, -A-Aj, A-Aj, -A+Aj, -A+Aj, -A-Aj, A+Aj, -A-Aj, A+Aj, -A+Aj, A+Aj, A-Aj, A-Aj, A-Aj, A-Aj, A+Aj, -A-Aj, -A+Aj, A+Aj, A+Aj, A+Aj, A-Aj, A-Aj, -A+Aj, - A-Aj, -A-Aj, -A-Aj, -A+Aj, A+Aj, -A+Aj, A-Aj, -A-Aj, -A-Aj, -A+Aj, -A-Aj, A+Aj, -A+Aj, -A-Aj, -A-Aj, - A+Aj, A-Aj, A-Aj, A+Aj, A-Aj, -A-Aj, -A+Aj, -A+Aj, A+Aj, A-Aj, -A+Aj, -A-Aj, -A+Aj, A+Aj, -A-Aj, - A+Aj, -A-Aj, A-Aj, -A+Aj, A+Aj, -A+Aj, -A+Aj, A-Aj, A+Aj, A+Aj, -A+Aj, A-Aj, A+Aj, A-Aj, A-Aj, -A-Aj, A+Aj, -A+Aj, A-Aj, -A+Aj, A+Aj |
| 7 | Polarization 1 | -A+Aj, -A+Aj, -A-Aj, -A-Aj, -A-Aj, A+Aj, -A-Aj, -A-Aj, -A+Aj, A+Aj, A+Aj, -A+Aj, -A+Aj, A+Aj, A-Aj, A+Aj, A+Aj, -A-Aj, -A-Aj, A+Aj, A-Aj, -A+Aj, A+Aj, -A+Aj, A+Aj, -A+Aj, A-Aj, A-Aj, A+Aj, -A-Aj, A+Aj, -A-Aj, A-Aj, -A-Aj, -A+Aj, -A+Aj, -A+Aj, -A+Aj, -A-Aj, A+Aj, A-Aj, -A-Aj, -A-Aj, -A-Aj, -A+Aj, - A+Aj, A-Aj, A+Aj, A+Aj, A+Aj, A-Aj, -A-Aj, A-Aj, -A+Aj, A+Aj, A+Aj, A-Aj, A+Aj, -A-Aj, A-Aj, A+Aj, A+Aj, A-Aj, -A+Aj, -A+Aj, -A-Aj, -A+Aj, A-Aj, A+Aj, -A-Aj, A-Aj, -A-Aj, -A+Aj, A-Aj, A+Aj, -A+Aj, A-Aj, -A-Aj, A-Aj, A-Aj, -A+Aj, -A-Aj, A-Aj, A+Aj, -A-Aj, -A-Aj, A-Aj, -A+Aj, -A-Aj, -A+Aj, -A+Aj, A+Aj, -A-Aj, A-Aj, -A+Aj, A-Aj, -A-Aj |
| | Polarization 2 | A+Aj, A+Aj, A-Aj, A-Aj, A-Aj, -A+Aj, A-Aj, A-Aj, A+Aj, -A+Aj, -A+Aj, A+Aj, A+Aj, -A+Aj, -A-Aj, - A+Aj, -A+Aj, A-Aj, A-Aj, -A+Aj, -A-Aj, A+Aj, -A+Aj, A+Aj, -A+Aj, A+Aj, -A-Aj, -A-Aj, -A+Aj, A-Aj, - A+Aj, A-Aj, -A-Aj, A-Aj, A+Aj, A+Aj, A+Aj, A+Aj, A-Aj, -A+Aj, -A-Aj, A-Aj, A-Aj, A-Aj, A-Aj, A+Aj, A+Aj, - A-Aj, -A+Aj, -A+Aj, -A+Aj, -A-Aj, A-Aj, -A-Aj, A+Aj, -A+Aj, -A+Aj, -A-Aj, -A+Aj, A-Aj, -A-Aj, -A+Aj, A-Aj, -A-Aj, -A+Aj, - A+Aj, -A-Aj, A+Aj, A+Aj, A-Aj, A+Aj, -A+Aj, -A-Aj, -A-Aj, A-Aj, A+Aj, -A-Aj, -A+Aj, -A-Aj, A-Aj, - A+Aj, A-Aj, A-Aj, -A+Aj, A-Aj, A-Aj, -A-Aj, A+Aj, A-Aj, A+Aj, A+Aj, -A+Aj, A-Aj, -A-Aj, A+Aj, -A-Aj, A-Aj |

(continued)

| Index | Polarization | Pilot sequence |
|---|---|---|
| 8 | Polarization 1 | A-Aj, A-Aj, A+Aj, A+Aj, A+Aj, -A-Aj, A+Aj, A+Aj, A-Aj, -A-Aj, -A-Aj, A-Aj, A-Aj, -A-Aj, -A+Aj, -A-Aj, - A-Aj, A+Aj, A+Aj, -A-Aj, -A+Aj, A-Aj, -A-Aj, A-Aj, -A-Aj, A-Aj, -A+Aj, -A+Aj, -A-Aj, A+Aj, -A-Aj, A+Aj, -A+Aj, A+Aj, A-Aj, A-Aj, A-Aj, A-Aj, A+Aj, -A-Aj, -A+Aj, A+Aj, A+Aj, A+Aj, A-Aj, A-Aj, -A+Aj, - A-Aj, -A-Aj, -A-Aj, -A+Aj, A+Aj, -A+Aj, A-Aj, -A-Aj, -A-Aj, -A+Aj, -A-Aj, A+Aj, -A+Aj, -A-Aj, -A-Aj, - A+Aj, A-Aj, A-Aj, A+Aj, A-Aj, -A-Aj, -A+Aj, -A+Aj, A+Aj, A-Aj, -A+Aj, -A-Aj, -A+Aj, A+Aj, -A-Aj, - A+Aj, -A+Aj, A-Aj, -A+Aj, -A-Aj, A-Aj, -A+Aj, A+Aj, -A+Aj, -A+Aj, A-Aj, A+Aj, -A+Aj, -A-Aj, A+Aj, A+Aj, -A+Aj, A-Aj, A+Aj, A-Aj, A-Aj, -A-Aj, A+Aj, -A+Aj, A-Aj, -A+Aj, A+Aj |
| | Polarization 2 | A+Aj, A+Aj, A-Aj, A-Aj, A-Aj, -A+Aj, A-Aj, A-Aj, A+Aj, -A+Aj, -A+Aj, A+Aj, A+Aj, -A+Aj, -A-Aj, - A+Aj, -A+Aj, A-Aj, A-Aj, -A+Aj, -A-Aj, A+Aj, -A+Aj, A+Aj, -A+Aj, A+Aj, -A-Aj, -A-Aj, -A+Aj, A-Aj, - A+Aj, A-Aj, -A-Aj, A-Aj, A+Aj, A+Aj, A+Aj, A+Aj, A-Aj, -A+Aj, -A-Aj, A-Aj, A-Aj, A-Aj, A+Aj, A+Aj, - A-Aj, -A+Aj, -A+Aj, -A+Aj, -A-Aj, A-Aj, -A-Aj, A+Aj, -A+Aj, -A+Aj, -A-Aj, -A+Aj, A-Aj, -A-Aj, -A+Aj, - A+Aj, -A-Aj, A+Aj, A+Aj, A-Aj, A+Aj, -A+Aj, -A-Aj, -A-Aj, A-Aj, A+Aj, -A-Aj, -A+Aj, -A-Aj, A-Aj, - A+Aj, -A-Aj, -A-Aj, A+Aj, -A-Aj, -A+Aj, A+Aj, -A-Aj, A-Aj, -A-Aj, -A-Aj, A+Aj, A-Aj, -A-Aj, -A+Aj, A-Aj, A-Aj, -A-Aj, A+Aj, A-Aj, A+Aj, A+Aj, -A+Aj, A-Aj, -A-Aj, A+Aj, -A-Aj, A-Aj |
| 9 | Polarization 1 | -A-Aj, -A+Aj, A-Aj, -A+Aj, -A-Aj, A+Aj, A-Aj, A-Aj, -A-Aj, A-Aj, -A+Aj, -A-Aj, -A-Aj, A+Aj, -A+Aj, -A-Aj, A-Aj, -A+Aj, -A+Aj, -A-Aj, -A+Aj, A-Aj, A+Aj, -A+Aj, A-Aj, -A+Aj, -A+Aj, A+Aj, -A-Aj, -A+Aj, A+Aj, -A+Aj, A-Aj, -A-Aj, -A+Aj, -A+Aj, A+Aj, A-Aj, -A-Aj, A-Aj, A-Aj, -A+Aj, A+Aj, A+Aj, -A+Aj, -A-Aj, A+Aj, -A+Aj, A+Aj, A+Aj, A-Aj, -A+Aj, -A-Aj, -A+Aj, A+Aj, A+Aj, A+Aj, -A+Aj, A-Aj, A-Aj, -A-Aj, - A-Aj, -A-Aj, -A+Aj, A+Aj, -A-Aj, A-Aj, A-Aj, A-Aj, A-Aj, -A-Aj, -A+Aj, -A-Aj, A+Aj, -A-Aj, A+Aj, -A+Aj, -A+Aj, A-Aj, A+Aj, A-Aj, A+Aj, A-Aj, -A+Aj, A+Aj, -A- Aj, -A-Aj, A+Aj, A+Aj, -A+Aj, A+Aj, A-Aj, A-Aj, A+Aj, A+Aj, A-Aj, -A-Aj, -A-Aj, A+Aj, -A-Aj, -A-Aj, -A-Aj, A-Aj, A-Aj |
| | Polarization 2 | -A+Aj, -A-Aj, A+Aj, -A-Aj, -A+Aj, A-Aj. A+Aj, A+Aj, -A+Aj, A+Aj, -A-Aj, -A+Aj, -A+Aj, A-Aj, -A-Aj, - A+Aj, A+Aj, -A-Aj, -A-Aj, -A+Aj, -A-Aj, A+Aj, A-Aj, -A-Aj, A+Aj, -A-Aj, -A-Aj, A-Aj, -A+Aj, -A-Aj, A-Aj, -A-Aj, A+Aj, -A+Aj, -A-Aj, -A-Aj, A-Aj, A+Aj, -A+Aj, A+Aj, A+Aj, -A-Aj, A- Aj, A-Aj, -A-Aj, -A+Aj, A-Aj, -A-Aj, A-Aj, A-Aj, A+Aj, -A-Aj, -A+Aj, -A-Aj, A-Aj, A-Aj, A-Aj, -A- Aj, A+Aj, A+Aj, -A+Aj, -A+Aj, -A+Aj, -A-Aj, A-Aj, -A+Aj, A+Aj, A+Aj, A+Aj, A+Aj, -A+Aj, -A- Aj, -A+Aj, A-Aj, -A+Aj, A-Aj, -A-Aj, -A-Aj, A+Aj, A-Aj, A+Aj, A-Aj, A+Aj, -A-Aj, A-Aj, -A+Aj, -A+Aj, A-Aj, A-Aj, -A-Aj, A-Aj, A+Aj, A+Aj, A-Aj, A-Aj, A+Aj, -A+Aj, -A+Aj, A-Aj, -A+Aj, -A+Aj, -A+Aj, A+Aj, A+Aj |
| 10 | Polarization 1 | -A-Aj, -A+Aj, A-Aj, -A+Aj, -A-Aj, A+Aj, A-Aj, A-Aj, -A-Aj, A-Aj, -A+Aj, -A-Aj, -A-Aj, A+Aj, -A+Aj, -A-Aj, A-Aj, -A+Aj, -A+Aj, -A-Aj, -A+Aj, A-Aj, A+Aj, -A+Aj, A-Aj, -A+Aj, -A+Aj, A+Aj, -A-Aj, -A+Aj, A+Aj, -A+Aj, A-Aj, -A-Aj, -A+Aj, -A+Aj, A+Aj, A-Aj, -A-Aj, A-Aj, A-Aj, -A+Aj, A+Aj, A+Aj, -A+Aj, -A-Aj, A+Aj, -A+Aj, A+Aj, A+Aj, A-Aj, -A+Aj, -A-Aj, -A+Aj, A+Aj, A+Aj, A+Aj, -A+Aj, A-Aj, A-Aj, -A-Aj, - A-Aj, -A-Aj, -A+Aj, A+Aj, -A-Aj, A-Aj, A-Aj, A-Aj, A-Aj, -A-Aj, -A+Aj, -A-Aj, A+Aj, -A-Aj, A+Aj, -A+Aj, -A+Aj, A-Aj, A+Aj, A-Aj, A+Aj, A-Aj, -A+Aj, A+Aj, -A- Aj, -A-Aj, A+Aj, A+Aj, -A+Aj, A+Aj, A-Aj, A-Aj, A+Aj, A+Aj, A-Aj, -A-Aj, -A-Aj, A+Aj, -A-Aj, -A-Aj, -A-Aj, A-Aj, A-Aj |
| | Polarization 2 | A-Aj, A+Aj, -A-Aj, A+Aj, A-Aj, -A+Aj, -A-Aj, -A-Aj, A-Aj, -A-Aj, A+Aj, A-Aj, A-Aj, -A+Aj, A+Aj, A-Aj, - A-Aj, A+Aj, A+Aj, A-Aj, A+Aj, -A-Aj, -A+Aj, A+Aj, -A-Aj, A+Aj, A+Aj, -A+Aj, A-Aj, A+Aj, -A+Aj, A+Aj, -A-Aj, A-Aj, A+Aj, A+Aj, -A+Aj, -A-Aj, A-Aj, -A-Aj, -A-Aj, A+Aj, -A+Aj, -A+Aj, A+Aj, A-Aj, -A+Aj, A+Aj, -A+Aj, -A+Aj, -A-Aj, A+Aj, A-Aj, A+Aj, -A+Aj, -A+Aj, -A+Aj, A+Aj, -A-Aj, -A-Aj, A-Aj, A-Aj, A-Aj, A+Aj, -A+Aj, A-Aj, -A-Aj, -A-Aj, -A-Aj, -A-Aj, A-Aj, A+Aj, A-Aj, -A+Aj, A-Aj, -A+Aj, A+Aj, A+Aj, - A-Aj, -A+Aj, -A-Aj, -A+Aj, -A-Aj, A+Aj, -A+Aj, A-Aj, A- Aj, -A+Aj, -A+Aj, A+Aj, -A+Aj, -A-Aj, -A-Aj, - A+Aj, -A+Aj, -A-Aj, A-Aj, A-Aj, -A+Aj, A-Aj, A- Aj, A-Aj, -A-Aj, -A-Aj |

(continued)

| Index | Polarization | Pilot sequence |
|---|---|---|
| 11 | Polarization 1 | -A+Aj, -A-Aj, A+Aj, -A-Aj, -A+Aj, A-Aj. A+Aj, A+Aj, -A+Aj, A+Aj, -A-Aj, -A+Aj, -A+Aj, A-Aj, -A-Aj, - A+Aj, A+Aj, -A-Aj, -A-Aj, -A+Aj, -A-Aj, A+Aj, A-Aj, -A-Aj, A+Aj, -A-Aj, -A-Aj, A-Aj, -A+Aj, -A-Aj, A-Aj, -A-Aj, A+Aj, -A+Aj, -A-Aj, -A-Aj, A-Aj, A+Aj, -A+Aj, A+Aj, A+Aj, -A-Aj, A-Aj, A-Aj, -A-Aj, -A+Aj, A-Aj, -A-Aj, A-Aj, A-Aj, A+Aj, -A-Aj, -A+Aj, -A-Aj, A-Aj, A-Aj, A-Aj, -A-Aj, A+Aj, A+Aj, -A+Aj, -A+Aj, -A+Aj, -A-Aj, A-Aj, -A+Aj, A+Aj, A+Aj, A+Aj, A+Aj, -A+Aj, -A-Aj, -A+Aj, A-Aj, -A+Aj, A-Aj, -A-Aj, -A-Aj, A+Aj, A-Aj, A+Aj, A-Aj, A+Aj, -A-Aj, A-Aj, -A+Aj, -A+Aj, A-Aj, A-Aj, -A-Aj, A-Aj, A+Aj, A+Aj, -A-Aj, A-Aj, A+Aj, -A+Aj, -A+Aj, A-Aj, -A+Aj, -A+Aj, -A+Aj, A+Aj, A+Aj |
| | Polarization 2 | A+Aj, A-Aj, -A+Aj, A-Aj, A+Aj, -A-Aj, -A+Aj, -A+Aj, A+Aj, -A+Aj, -A-Aj, A+Aj, A+Aj, -A-Aj, A-Aj, A+Aj, -A+Aj, A-Aj, A-Aj, A+Aj, A-Aj, -A+Aj, -A-Aj, A-Aj, -A+Aj, A-Aj, A-Aj, -A-Aj, A+Aj, A-Aj, -A-Aj, A-Aj, -A+Aj, A+Aj, A-Aj, A-Aj, -A-Aj, -A+Aj, A+Aj, -A+Aj, -A-Aj, -A-Aj, -A-Aj, A-Aj, -A+Aj, -A+Aj, A+Aj, A+Aj, A+Aj, A-Aj, -A-Aj, A+Aj, -A+Aj, -A+Aj, -A+Aj, -A+Aj, A+Aj, A-Aj, A+Aj, -A-Aj, A+Aj, -A-Aj, A-Aj, A-Aj, -A+Aj, -A-Aj, -A+Aj, -A-Aj, -A+Aj, A-Aj, -A-Aj, A+Aj, A+Aj, -A-Aj, -A-Aj, A-Aj, -A-Aj, -A+Aj, - A+Aj, -A-Aj, -A-Aj, -A+Aj, A+Aj, A+Aj, -A-Aj, A+Aj, A+Aj, A+Aj, -A+Aj, -A+Aj |
| 12 | Polarization 1 | A-Aj, A+Aj, -A-Aj, A+Aj, A-Aj, -A+Aj, -A-Aj, -A-Aj, A-Aj, -A-Aj, A+Aj, A-Aj, A-Aj, -A+Aj, A+Aj, A-Aj, - A-Aj, A+Aj, A+Aj, A-Aj, A+Aj, -A-Aj, -A+Aj, A+Aj, -A-Aj, A+Aj, A+Aj, -A+Aj, A-Aj, A+Aj, -A+Aj, A+Aj, -A-Aj, A-Aj, A+Aj, A+Aj, -A+Aj, -A-Aj, A-Aj, -A-Aj, -A-Aj, A+Aj, -A+Aj, -A+Aj, A+Aj, A-Aj, -A+Aj, A+Aj, -A+Aj, -A+Aj, -A-Aj, A+Aj, A-Aj, A+Aj, -A+Aj, -A+Aj, -A+Aj, A+Aj, -A-Aj, -A-Aj, A-Aj, A-Aj, A-Aj, A+Aj, -A+Aj, A-Aj, -A-Aj, -A-Aj, -A-Aj, -A-Aj, A-Aj, A+Aj, A-Aj, -A+Aj, A-Aj, -A+Aj, A+Aj, A+Aj, - A-Aj, -A+Aj, A-Aj, -A+Aj, -A-Aj, A+Aj, -A+Aj, A-Aj, A-Aj, -A+Aj, -A+Aj, A+Aj, -A+Aj, -A-Aj, -A-Aj, - A+Aj, -A+Aj, -A-Aj, A-Aj, A-Aj, -A+Aj, A-Aj, A-Aj, A-Aj, -A-Aj, -A-Aj |
| | Polarization 2 | A+Aj, A-Aj, -A+Aj, A-Aj, A+Aj, -A-Aj, -A+Aj, -A+Aj, A+Aj, -A+Aj, A-Aj, A+Aj, A+Aj, -A-Aj, A-Aj, A+Aj, -A+Aj, A-Aj, A-Aj, A+Aj, A-Aj, -A+Aj, -A-Aj, A-Aj, -A+Aj, A-Aj, A-Aj, -A-Aj, A+Aj, A-Aj, -A-Aj, A-Aj, -A+Aj, A+Aj, A-Aj, A-Aj, -A-Aj, -A+Aj, A-Aj, A+Aj, A-Aj, -A-Aj, -A-Aj, -A-Aj, A-Aj, -A+Aj, -A+Aj, A+Aj, A+Aj, A+Aj, A-Aj, -A-Aj, A+Aj, -A+Aj, -A+Aj, -A+Aj, -A+Aj, A+Aj, A-Aj, A+Aj, -A-Aj, A+Aj, -A-Aj, A-Aj, A-Aj, -A+Aj, -A-Aj, -A+Aj, -A-Aj, -A+Aj, A-Aj, -A-Aj, A+Aj, A+Aj, -A-Aj, -A-Aj, A-Aj, -A-Aj, -A+Aj, - A+Aj, -A-Aj, -A-Aj, -A+Aj, A+Aj, A+Aj, -A-Aj, A+Aj, A+Aj, A+Aj, -A+Aj, -A+Aj |
| 13 | Polarization 1 | -A-Aj, A-Aj, -A-Aj, A+Aj, -A+Aj, A+Aj, -A-Aj, -A+Aj, -A-Aj, A+Aj, -A-Aj, A+Aj, -A+Aj, -A-Aj, A+Aj, -A+Aj, A-Aj, -A+Aj, -A+Aj, -A+Aj, -A+Aj, -A-Aj, -A+Aj, -A+Aj, -A-Aj, A-Aj, A-Aj, -A-Aj, -A-Aj, -A-Aj, - A+Aj, A-Aj, -A-Aj, -A+Aj, -A-Aj, -A-Aj, A+Aj, A+Aj, A+Aj, A-Aj, A-Aj, A+Aj, A-Aj, -A+Aj, A+Aj, -A+Aj, A+Aj, A+Aj, A-Aj, -A-Aj, -A+Aj, A-Aj, A-Aj, A+Aj, -A-Aj, A+Aj, A+Aj, A-Aj, A+Aj, A-Aj, A-Aj, -A-Aj, - A+Aj, -A+Aj, -A+Aj, A+Aj, A-Aj, -A+Aj, A-Aj, -A-Aj, A+Aj, A-Aj, -A-Aj, -A-Aj, A+Aj, A-Aj, A-Aj, A-Aj, A+Aj, -A+Aj, A-Aj, A+Aj, A+Aj, -A+Aj, A-Aj, -A-Aj, -A-Aj, -A+Aj, -A-Aj, A-Aj, -A+Aj, A+Aj, -A-Aj, A-Aj, A+Aj, A+Aj, A-Aj, -A+Aj, -A-Aj, A-Aj, A+Aj, -A+Aj, -A-Aj, -A+Aj |
| | Polarization 2 | -A+Aj, A+Aj, -A+Aj, A-Aj, -A-Aj, A-Aj, -A+Aj, -A-Aj, -A+Aj, A-Aj, -A+Aj, A-Aj, -A-Aj, -A+Aj, A-Aj, -A-Aj, A+Aj, -A-Aj, -A-Aj, -A-Aj, -A-Aj, -A+Aj, -A-Aj, -A-Aj, -A+Aj, A+Aj, A+Aj, -A+Aj, -A+Aj, -A+Aj, -A-Aj, A+Aj, -A+Aj, -A-Aj, -A+Aj, -A+Aj, A-Aj, A-Aj, A-Aj, A+Aj, A+Aj, A-Aj, A+Aj, -A-Aj, A-Aj, -A-Aj, A-Aj, A-Aj, A+Aj, -A+Aj, -A-Aj, A+Aj, A+Aj, A-Aj, -A+Aj, A-Aj, A-Aj, A+Aj, A-Aj, A+Aj, A+Aj, -A+Aj, -A-Aj, -A-Aj, -A-Aj, A-Aj, A+Aj, -A-Aj, A+Aj, -A+Aj, A-Aj, A+Aj, -A+Aj, -A+Aj, A-Aj, A+Aj, A+Aj, A+Aj, A-Aj, -A-Aj, A+Aj, A-Aj, A-Aj, -A-Aj, A+Aj, -A+Aj, -A+Aj, A-Aj, -A+Aj, A+Aj, -A-Aj, A-Aj, -A+Aj, A+Aj, A-Aj, A-Aj, A+Aj, -A-Aj, -A+Aj, A+Aj, A-Aj, -A-Aj, -A+Aj, -A-Aj |

**158**

(continued)

| Index | Polarization | Pilot sequence |
|---|---|---|
| 14 | Polarization 1 | -A-Aj, A-Aj, -A-Aj, A+Aj, -A+Aj, A+Aj, -A-Aj, -A+Aj, -A-Aj, A+Aj, -A-Aj, A+Aj, -A+Aj, -A-Aj, A+Aj, - A+Aj, A-Aj, -A+Aj, -A+Aj, -A+Aj, -A+Aj, -A-Aj, -A+Aj, -A+Aj, -A-Aj, A-Aj, A-Aj, -A-Aj, -A-Aj, -A-Aj, - A+Aj, A-Aj, -A-Aj, -A+Aj, -A-Aj, -A-Aj, A+Aj, A+Aj, A+Aj, A-Aj, A-Aj, A+Aj, A-Aj, -A+Aj, A+Aj, -A+Aj, A+Aj, A+Aj, A-Aj, -A-Aj, -A+Aj, A-Aj, A-Aj, A+Aj, -A-Aj, A+Aj, A+Aj, A-Aj, A+Aj, A-Aj, A-Aj, -A-Aj, - A+Aj, -A+Aj, -A+Aj, A+Aj, A-Aj, -A+Aj, A-Aj, -A-Aj, A+Aj, A-Aj, -A-Aj, -A-Aj, A+Aj, A-Aj, A-Aj, A-Aj, A+Aj, -A+Aj, A-Aj, A+Aj, A+Aj, -A+Aj, A-Aj, -A-Aj, -A-Aj, -A+Aj, -A-Aj, A-Aj, -A+Aj, A+Aj, -A-Aj, A-Aj, A+Aj, A+Aj, A-Aj, -A+Aj, -A-Aj, A-Aj, A+Aj, -A+Aj, -A-Aj, -A+Aj |
| | Polarization 2 | A-Aj, -A-Aj, A-Aj, -A+Aj, A+Aj, -A+Aj, A-Aj, A+Aj, A-Aj, -A+Aj, A-Aj, -A+Aj, A+Aj, A-Aj, -A+Aj, A+Aj, -A-Aj, A+Aj, A+Aj, A+Aj, A+Aj, A-Aj, A+Aj, A+Aj, A-Aj, -A-Aj, -A-Aj, A-Aj, A-Aj, A-Aj, A+Aj, -A-Aj, A-Aj, A+Aj, A-Aj, A-Aj, -A+Aj, -A+Aj, -A+Aj, -A-Aj, -A-Aj, -A+Aj, -A-Aj, A+Aj, -A+Aj, A+Aj, -A+Aj, - A+Aj, -A-Aj, A-Aj, A+Aj, -A-Aj, -A-Aj, -A+Aj, A-Aj, -A+Aj, -A+Aj, -A-Aj, -A+Aj, -A-Aj, -A-Aj, A-Aj, A+Aj, A+Aj, A+Aj, -A+Aj, -A-Aj, A+Aj, -A-Aj, A-Aj, -A+Aj, -A-Aj, A-Aj, A-Aj, -A+Aj, -A-Aj, -A-Aj, -A-Aj, -A+Aj, A+Aj, -A-Aj, -A+Aj, -A+Aj, A+Aj, -A-Aj, A-Aj, A-Aj, A+Aj, A-Aj, -A-Aj, A+Aj, -A+Aj, A-Aj, - A-Aj, -A+Aj, -A+Aj, -A-Aj, A+Aj, A-Aj, -A-Aj, -A+Aj, A+Aj, A-Aj, A+Aj |
| 15 | Polarization 1 | -A+Aj, A+Aj, -A+Aj, A-Aj, -A-Aj, A-Aj, -A+Aj, -A-Aj, -A+Aj, A-Aj, -A+Aj, A-Aj, -A-Aj, -A+Aj, A-Aj, -A-Aj, A+Aj, -A-Aj, -A-Aj, -A-Aj, -A-Aj, -A+Aj, -A-Aj, -A-Aj, -A+Aj, A+Aj, A+Aj, -A+Aj, -A+Aj, -A+Aj, -A-Aj, A+Aj, -A+Aj, -A-Aj, -A+Aj, -A+Aj, A-Aj, A-Aj, A-Aj, A+Aj, A+Aj, A-Aj, A+Aj, -A-Aj, A-Aj, -A-Aj, A-Aj, A-Aj, A+Aj, -A+Aj, -A-Aj, A+Aj, A+Aj, A-Aj, -A+Aj, A-Aj, A-Aj, A+Aj, A-Aj, A+Aj, A+Aj, -A+Aj, -A-Aj, -A-Aj, -A-Aj, A-Aj, A+Aj, -A-Aj, A+Aj, -A+Aj, A-Aj, A+Aj, -A+Aj, -A+Aj, A-Aj, A+Aj, A+Aj, A+Aj, A-Aj, -A-Aj, A+Aj, A-Aj, A-Aj, -A-Aj, A+Aj, -A+Aj, -A+Aj, -A-Aj, -A+Aj, A+Aj, -A-Aj, A-Aj, -A+Aj, A+Aj, A-Aj, -A-Aj, A+Aj, -A-Aj, -A+Aj, A+Aj, A-Aj, -A-Aj, -A+Aj, -A-Aj |
| | Polarization 2 | A+Aj, -A+Aj, A+Aj, -A-Aj, A-Aj, -A-Aj, A+Aj, A-Aj, A+Aj, -A-Aj, A+Aj, -A-Aj, A-Aj, A+Aj, -A-Aj, A-Aj, - A+Aj, A-Aj, A-Aj, A-Aj, A-Aj, A+Aj, A-Aj, A-Aj, A+Aj, -A+Aj, -A+Aj, A+Aj, A+Aj, A+Aj, A-Aj, -A+Aj, A+Aj, A-Aj, A+Aj, A+Aj, -A-Aj, -A-Aj, -A-Aj, -A+Aj, -A+Aj, -A-Aj, -A+Aj, A-Aj, -A-Aj, A-Aj, -A-Aj, -A-Aj, -A+Aj, A+Aj, A-Aj, -A+Aj, -A+Aj, -A-Aj, A+Aj, -A-Aj, -A-Aj, -A+Aj, -A-Aj, -A+Aj, A+Aj, A-Aj, A-Aj, A-Aj, -A-Aj, -A+Aj, A-Aj, -A+Aj, A+Aj, -A-Aj, -A+Aj, A+Aj, A+Aj, -A-Aj, -A+Aj, -A+Aj, -A+Aj, -A-Aj, A-Aj, -A+Aj, -A-Aj, -A-Aj, A-Aj, -A+Aj, A+Aj, A+Aj, A-Aj, A+Aj, -A+Aj, A-Aj, -A-Aj, A+Aj, -A+Aj, -A-Aj, -A-Aj, -A+Aj, A-Aj, A+Aj, -A+Aj, -A-Aj, A-Aj, A+Aj, A-Aj |
| 16 | Polarization 1 | A-Aj, -A-Aj, A-Aj, -A+Aj, A+Aj, -A+Aj, A-Aj, A+Aj, A-Aj, -A+Aj, A-Aj, -A+Aj, A+Aj, A-Aj, -A+Aj, A+Aj, -A-Aj, A+Aj, A+Aj, A+Aj, A+Aj, A-Aj, A+Aj, A+Aj, A-Aj, -A-Aj, -A-Aj, A-Aj, A-Aj, A+Aj, -A-Aj, A-Aj, A+Aj, A-Aj, A-Aj, -A+Aj, -A+Aj, -A+Aj, -A-Aj, -A-Aj, -A+Aj, -A-Aj, A+Aj, -A+Aj, A+Aj, -A+Aj, - A+Aj, -A-Aj, A-Aj, A+Aj, -A-Aj, -A-Aj, -A+Aj, A-Aj, -A+Aj, -A+Aj, -A-Aj, -A+Aj, -A-Aj, -A-Aj, A-Aj, A+Aj, A+Aj, A+Aj, -A+Aj, -A-Aj, A+Aj, -A-Aj, A-Aj, -A+Aj, -A-Aj, A-Aj, A-Aj, -A+Aj, -A-Aj, -A-Aj, -A-Aj, -A+Aj, A+Aj, -A-Aj, -A+Aj, -A+Aj, A+Aj, -A-Aj, A-Aj, A-Aj, A+Aj, A-Aj, -A-Aj, A+Aj, -A+Aj, A-Aj, - A-Aj, -A+Aj, -A+Aj, -A-Aj, A+Aj, A-Aj, -A-Aj, -A+Aj, A+Aj, A-Aj, A+Aj |
| | Polarization 2 | A+Aj, -A+Aj, A+Aj, -A-Aj, A-Aj, -A-Aj, A+Aj, A-Aj, A+Aj, -A-Aj, A+Aj, -A-Aj, A-Aj, A+Aj, -A-Aj, A-Aj, - A+Aj, A-Aj, A-Aj, A-Aj, A-Aj, A+Aj, A-Aj, A-Aj, A+Aj, -A+Aj, -A+Aj, A+Aj, A+Aj, A+Aj, A-Aj, -A+Aj, A+Aj, A-Aj, A+Aj, A+Aj, -A-Aj, -A-Aj, -A-Aj, -A+Aj, -A+Aj, -A-Aj, -A+Aj, A-Aj, -A-Aj, A-Aj, -A-Aj, -A-Aj, -A+Aj, A+Aj, A-Aj, -A+Aj, -A+Aj, -A-Aj, A+Aj, -A-Aj, -A-Aj, -A+Aj, -A-Aj, -A+Aj, A+Aj, A-Aj, A-Aj, A-Aj, -A-Aj, -A+Aj, A-Aj, -A+Aj, A+Aj, -A-Aj, -A+Aj, A+Aj, A+Aj, -A-Aj, -A+Aj, -A+Aj, -A+Aj, -A-Aj, A-Aj, -A+Aj, A-Aj, -A-Aj, A+Aj, - A+Aj, -A-Aj, -A-Aj, -A+Aj, A-Aj, A+Aj, -A+Aj, -A-Aj, A-Aj, A+Aj, A-Aj |

(continued)

| Index | Polarization | Pilot sequence |
|---|---|---|
| 17 | Polarization 1 | -A-Aj, -A+Aj, -A+Aj, A+Aj, A+Aj, A-Aj, A+Aj, A-Aj, A-Aj, -A+Aj, A-Aj, -A-Aj, -A+Aj, -A+Aj, -A-Aj, A-Aj, -A-Aj, A+Aj, A-Aj, -A-Aj, -A-Aj, A+Aj, -A-Aj, A+Aj, A-Aj, A-Aj, A-Aj, -A-Aj, A+Aj, A+Aj, -A+Aj, A-Aj, -A+Aj, -A-Aj, A-Aj, -A-Aj, -A+Aj, -A+Aj, -A+Aj, -A-Aj, A+Aj, A+Aj, A-Aj, -A+Aj, -A-Aj, -A+Aj, A-Aj, A-Aj, A+Aj, -A+Aj, A-Aj, -A-Aj, A+Aj, A+Aj, A+Aj, -A+Aj, -A-Aj, -A-Aj, A-Aj, A+Aj, -A-Aj, A-Aj, A+Aj, A+Aj, -A+Aj, A-Aj, A-Aj, -A+Aj, -A-Aj, -A-Aj, -A+Aj, A+Aj, -A-Aj, -A+Aj, A+Aj, -A+Aj, -A+Aj, A+Aj, -A-Aj, -A+Aj, A-Aj, A+Aj, A-Aj, A+Aj, -A-Aj, -A-Aj, A-Aj, -A+Aj, -A-Aj, A-Aj, -A+Aj, A+Aj, A-Aj, -A+Aj, -A-Aj, A-Aj, A+Aj, -A-Aj, A+Aj, -A+Aj, -A-Aj, -A+Aj, A-Aj, A+Aj |
| | Polarization 2 | -A-Aj, A+Aj, A-Aj, -A+Aj, -A-Aj, A+Aj, -A+Aj, A+Aj, A+Aj, -A+Aj, -A+Aj, -A+Aj, -A-Aj, -A+Aj, -A-Aj, A+Aj, -A+Aj, -A-Aj, A-Aj, A+Aj, -A+Aj, -A+Aj, A-Aj, -A-Aj, -A+Aj, A+Aj, A+Aj, A+Aj, -A-Aj, A+Aj, - A+Aj, -A+Aj, A+Aj, -A+Aj, A+Aj, -A+Aj, A+Aj, A-Aj, A-Aj, -A-Aj, A-Aj, -A-Aj, -A-Aj, -A+Aj, -A+Aj, - A+Aj, A+Aj, A-Aj, -A+Aj, A-Aj, -A+Aj, A-Aj, -A-Aj, A+Aj, A-Aj, -A+Aj, A-Aj, -A-Aj, -A-Aj, A+Aj, A+Aj, A-Aj, -A-Aj, A-Aj, A-Aj, A-Aj, A-Aj, A-Aj, -A+Aj, -A-Aj, A-Aj, A-Aj, A-Aj, -A-Aj, -A+Aj, -A-Aj, -A-Aj, A-Aj, -A+Aj, A+Aj, A+Aj, A+Aj, A+Aj, A-Aj, A+Aj, -A+Aj, A+Aj, A+Aj, A-Aj, -A-Aj, A+Aj, -A-Aj, -A+Aj, A-Aj, A-Aj, -A-Aj, -A-Aj, -A-Aj, -A-Aj, A+Aj, -A+Aj, A-Aj, -A-Aj, -A-Aj |
| 18 | Polarization 1 | -A-Aj, A+Aj, A-Aj, -A+Aj, -A-Aj, A+Aj, -A+Aj, A+Aj, A+Aj, -A+Aj, -A+Aj, -A+Aj, -A-Aj, -A+Aj, -A-Aj, A+Aj, -A+Aj, -A-Aj, A-Aj, A+Aj, -A+Aj, -A+Aj, A-Aj, -A-Aj, -A+Aj, A+Aj, A+Aj, A+Aj, -A-Aj, A+Aj, - A+Aj, -A+Aj, A+Aj, -A+Aj, A+Aj, -A+Aj, A+Aj, A-Aj, A-Aj, -A-Aj, A-Aj, -A-Aj, -A-Aj, -A+Aj, -A+Aj, - A+Aj, A+Aj, A-Aj, -A+Aj, A-Aj, -A+Aj, A-Aj, -A-Aj, A+Aj, A-Aj, -A+Aj, A-Aj, -A-Aj, A+Aj, A+Aj, A-Aj, -A-Aj, A-Aj, A-Aj, A-Aj, A-Aj, A-Aj, -A+Aj, -A-Aj, A-Aj, A-Aj, A-Aj, A-Aj, -A-Aj, -A+Aj, A+Aj, A+Aj, A+Aj, A+Aj, A-Aj, A+Aj, -A+Aj, A+Aj, A+Aj, A-Aj, -A-Aj, A+Aj, -A-Aj, -A+Aj, A-Aj, A-Aj, -A-Aj, -A-Aj, -A-Aj, -A-Aj, A+Aj, -A+Aj, A-Aj, -A-Aj, -A-Aj |
| | Polarization 2 | A+Aj, -A-Aj, -A-Aj, A-Aj, A+Aj, A+Aj, A+Aj, -A+Aj, A+Aj, -A+Aj, -A-Aj, A+Aj, -A-Aj, -A-Aj, A-Aj, A-Aj, -A+Aj, -A-Aj, -A+Aj, A+Aj, -A-Aj, -A-Aj, -A+Aj, A-Aj, -A+Aj, A+Aj, -A+Aj, -A+Aj, -A-Aj, -A+Aj, A+Aj, A-Aj, A+Aj, -A-Aj, A-Aj, -A+Aj, -A-Aj, -A-Aj, A-Aj, A-Aj, A-Aj, -A+Aj, A+Aj, A+Aj, -A-Aj, A-Aj, -A-Aj, A+Aj, -A+Aj, -A+Aj, A-Aj, A+Aj, -A-Aj, -A+Aj, A+Aj, A+Aj, A-Aj, A-Aj, -A-Aj, -A+Aj, -A+Aj, A-Aj, -A+Aj, -A+Aj, A+Aj, A-Aj, A+Aj, -A+Aj, -A-Aj, A-Aj, -A-Aj, -A-Aj, A+Aj, A-Aj, -A-Aj, A+Aj, A-Aj, A-Aj, A+Aj, A-Aj, -A-Aj, A+Aj, -A+Aj, A+Aj, -A+Aj, A-Aj, -A-Aj, -A+Aj, -A-Aj, A-Aj, -A+Aj, -A-Aj, A+Aj, A+Aj, -A-Aj, A-Aj, -A+Aj, -A+Aj, A-Aj, -A+Aj, A-Aj, A-Aj, -A-Aj, A+Aj |
| 19 | Polarization 1 | -A-Aj, A+Aj, A-Aj, -A+Aj, -A-Aj, A+Aj, -A+Aj, A+Aj, A+Aj, -A+Aj, -A+Aj, -A+Aj, -A-Aj, -A+Aj, -A-Aj, A+Aj, -A+Aj, -A-Aj, A-Aj, A+Aj, -A+Aj, -A+Aj, A-Aj, -A-Aj, -A+Aj, A+Aj, A+Aj, A+Aj, -A-Aj, A+Aj, - A+Aj, -A+Aj, A+Aj, -A+Aj, A+Aj, -A+Aj, A+Aj, A-Aj, A-Aj, -A-Aj, A-Aj, -A-Aj, -A-Aj, -A+Aj, -A+Aj, - A+Aj, A+Aj, A-Aj, -A+Aj, A-Aj, -A+Aj, A-Aj, -A-Aj, A+Aj, A-Aj, -A+Aj, A-Aj, -A-Aj, A+Aj, A+Aj, A-Aj, -A-Aj, A-Aj, A-Aj, A-Aj, A-Aj, A-Aj, -A+Aj, -A-Aj, A-Aj, A-Aj, A-Aj, A-Aj, -A-Aj, -A+Aj, A+Aj, A+Aj, A+Aj, A+Aj, A-Aj, A+Aj, -A+Aj, A+Aj, A+Aj, A-Aj, -A-Aj, A+Aj, -A-Aj, -A+Aj, A-Aj, A-Aj, -A-Aj, -A-Aj, -A-Aj, -A-Aj, A+Aj, -A+Aj, A-Aj, -A-Aj, -A-Aj |
| | Polarization 2 | A+Aj, A-Aj, -A-Aj, -A+Aj, -A+Aj, A+Aj, A+Aj, A-Aj, A+Aj, A-Aj, A-Aj, -A+Aj, A-Aj, -A-Aj, -A+Aj, - A+Aj, -A-Aj, A-Aj, -A-Aj, A+Aj, A-Aj, -A-Aj, -A-Aj, A+Aj, -A-Aj, A+Aj, A-Aj, A-Aj, A-Aj, -A-Aj, A+Aj, A+Aj, -A+Aj, A-Aj, -A+Aj, -A-Aj, A-Aj, -A-Aj, -A+Aj, -A+Aj, -A+Aj, -A-Aj, A+Aj, A+Aj, A-Aj, -A+Aj, - A-Aj, -A+Aj, A-Aj, A-Aj, A+Aj, -A+Aj, A-Aj, -A-Aj, A+Aj, A+Aj, A+Aj, -A+Aj, -A-Aj, -A-Aj, A-Aj, A+Aj, -A-Aj, A-Aj, A+Aj, A+Aj, -A+Aj, A-Aj, A-Aj, A+Aj, A-Aj, A+Aj, - A-Aj, -A+Aj, A-Aj, A-Aj, A+Aj, -A+Aj, A-Aj, -A-Aj, A+Aj, A+Aj, A+Aj, A+Aj, -A-Aj, -A-Aj, A-Aj, -A+Aj, -A-Aj, A+Aj, A-Aj, -A-Aj, -A-Aj, -A+Aj, A+Aj, -A-Aj, -A+Aj, A+Aj, - A+Aj, -A+Aj, A+Aj, -A-Aj, -A+Aj, A-Aj, A+Aj, A-Aj, A+Aj, -A-Aj, -A-Aj, A-Aj, -A+Aj, -A-Aj, A-Aj, - A+Aj, A+Aj, A-Aj, -A+Aj, -A-Aj, A-Aj, A+Aj, -A-Aj, A+Aj, -A+Aj, -A-Aj, -A+Aj |

(continued)

| Index | Polarization | Pilot sequence |
|---|---|---|
| 20 | Polarization 1 | -A-Aj, -A-Aj, -A+Aj, A-Aj, A+Aj, -A-Aj, -A-Aj, -A-Aj, -A-Aj, -A+Aj, -A+Aj, A-Aj, -A-Aj, A+Aj, -A-Aj, - A+Aj, A+Aj, A+Aj, A-Aj, A+Aj, -A+Aj, A+Aj, A+Aj, A+Aj, A+Aj, A-Aj, -A+Aj, -A-Aj, -A-Aj, A-Aj, -A-Aj, -A+Aj, -A+Aj, -A+Aj, -A-Aj, A-Aj, -A+Aj, -A+Aj, -A+Aj, -A+Aj, -A+Aj, -A-Aj, -A+Aj, A+Aj, A+Aj, -A-Aj, -A-Aj, -A+Aj, A-Aj, -A+Aj, A+Aj, -A-Aj, -A+Aj, A-Aj, -A+Aj, A-Aj, -A+Aj, A+Aj, A-Aj, A-Aj, A-Aj, - A-Aj, -A-Aj, -A+Aj, -A-Aj, -A+Aj, -A+Aj, A+Aj, A-Aj, A+Aj, A-Aj, A+Aj, A-Aj, A-Aj, A+Aj, -A-Aj, A+Aj, A+Aj, A+Aj, A-Aj, -A-Aj, -A+Aj, A-Aj, A-Aj, A+Aj, -A+Aj, -A-Aj, A-Aj, A+Aj, -A-Aj, A-Aj, -A-Aj, A-Aj, A-Aj, A-Aj, A+Aj, A+Aj, A-Aj, A+Aj, -A-Aj, A-Aj, -A+Aj, A+Aj, -A-Aj |
| | Polarization 2 | A-Aj, -A-Aj, A-Aj, A+Aj, -A-Aj, A+Aj, -A+Aj, -A-Aj, A-Aj, -A+Aj, A+Aj, A-Aj, -A+Aj, -A-Aj, A-Aj, - A+Aj, -A-Aj, -A-Aj, A+Aj, -A+Aj, A+Aj, -A+Aj, A-Aj, -A-Aj, A+Aj, A-Aj, A-Aj, A+Aj, A-Aj, -A-Aj, A+Aj, A-Aj, -A-Aj, -A-Aj, A-Aj, -A+Aj, -A+Aj, A-Aj, A+Aj, A+Aj, -A+Aj, -A-Aj, A+Aj, -A+Aj, -A-Aj, -A-Aj, A-Aj, A+Aj, A+Aj, A+Aj, -A-Aj, -A+Aj, A-Aj, A+Aj, -A+Aj, -A+Aj, A-Aj, -A-Aj, A-Aj, -A+Aj, A+Aj, A+Aj, - A-Aj, A-Aj, A-Aj, A-Aj, -A-Aj, -A+Aj, -A-Aj, A-Aj, -A+Aj, A-Aj, A+Aj, A+Aj, -A-Aj, -A+Aj, -A+Aj, - A+Aj, A+Aj, -A-Aj, A+Aj, -A-Aj, -A-Aj, -A+Aj, A+Aj, -A-Aj, -A+Aj, -A-Aj, A-Aj, A-Aj, -A-Aj, -A+Aj, A-Aj, -A+Aj, -A+Aj, A+Aj, -A+Aj, A+Aj, A+Aj, A-Aj, A-Aj, -A-Aj, -A+Aj, A+Aj |
| 21 | Polarization 1 | -A-Aj, -A-Aj, -A+Aj, A-Aj, A+Aj, -A-Aj, -A-Aj, -A-Aj, -A-Aj, -A+Aj, -A+Aj, A-Aj, -A-Aj, A+Aj, -A-Aj, - A+Aj, A+Aj, A+Aj, A-Aj, A+Aj, -A+Aj, A+Aj, A+Aj, A+Aj, A+Aj, A-Aj, -A+Aj, -A-Aj, -A-Aj, A-Aj, -A-Aj, -A+Aj, -A+Aj, -A+Aj, -A-Aj, A-Aj, -A+Aj, -A+Aj, -A+Aj, -A+Aj, -A+Aj, -A-Aj, -A+Aj, A+Aj, A+Aj, -A-Aj, -A-Aj, -A+Aj, A-Aj, -A+Aj, A+Aj, -A-Aj, -A+Aj, A-Aj, -A+Aj, A-Aj, -A+Aj, A+Aj, A-Aj, A-Aj, A-Aj, - A-Aj, -A-Aj, -A+Aj, -A-Aj, -A+Aj, -A+Aj, A+Aj, A-Aj, A+Aj, A-Aj, A+Aj, A-Aj, A-Aj, A+Aj, -A-Aj, A+Aj, A+Aj, A+Aj, A-Aj, -A-Aj, -A+Aj, A-Aj, A-Aj, A+Aj, -A+Aj, -A-Aj, A-Aj, A+Aj, -A-Aj, A-Aj, -A-Aj, A-Aj, A-Aj, A-Aj, A+Aj, A+Aj, A-Aj, A+Aj, -A-Aj, A-Aj, -A+Aj, A+Aj, -A-Aj |
| | Polarization 2 | A+Aj, -A-Aj, -A+Aj, -A+Aj, A-Aj, -A+Aj, A-Aj, A-Aj, -A+Aj, -A-Aj, A+Aj, A+Aj, -A-Aj, A-Aj, -A+Aj, -A-Aj, A-Aj, -A-Aj, -A+Aj, A-Aj, A+Aj, A-Aj, A+Aj, -A-Aj, -A+Aj, A+Aj, -A+Aj, -A+Aj, A+Aj, -A-Aj, -A+Aj, A+Aj, -A-Aj, -A-Aj, -A+Aj, -A-Aj, A-Aj, A+Aj, -A+Aj, A+Aj, A-Aj, A-Aj, -A+Aj, A-Aj, A-Aj, -A-Aj, - A+Aj, -A+Aj, A+Aj, A+Aj, A-Aj, -A-Aj, A+Aj, -A+Aj, A-Aj, A-Aj, A+Aj, -A-Aj, -A+Aj, -A-Aj, A+Aj, A+Aj, A-Aj, -A+Aj, -A+Aj, -A+Aj, -A-Aj, -A-Aj, A-Aj, -A+Aj, -A-Aj, A+Aj, -A+Aj, A+Aj, A-Aj, -A-Aj, A-Aj, A-Aj, A+Aj, A-Aj, -A+Aj, A-Aj, -A-Aj, -A-Aj, A+Aj, A-Aj, -A-Aj, A-Aj, -A+Aj, -A+Aj, -A-Aj, -A-Aj, A+Aj, -A-Aj, A-Aj, A+Aj, A-Aj, A+Aj, A+Aj, A+Aj, -A+Aj, -A-Aj, -A-Aj, A+Aj |
| 22 | Polarization 1 | -A-Aj, -A-Aj, -A+Aj, A-Aj, A+Aj, -A-Aj, -A-Aj, -A-Aj, -A-Aj, -A+Aj, -A+Aj, A-Aj, -A-Aj, A+Aj, -A-Aj, - A+Aj, A+Aj, A+Aj, A-Aj, A+Aj, -A+Aj, A+Aj, A+Aj, A+Aj, A+Aj, A-Aj, -A+Aj, -A-Aj, -A-Aj, A-Aj, -A-Aj, -A+Aj, -A+Aj, -A+Aj, -A-Aj, A-Aj, -A+Aj, -A+Aj, -A+Aj, -A+Aj, -A+Aj, -A-Aj, -A+Aj, A+Aj, A+Aj, -A-Aj, -A-Aj, -A+Aj, A-Aj, -A+Aj, A+Aj, -A-Aj, -A+Aj, A-Aj, -A+Aj, A-Aj, -A+Aj, A+Aj, A-Aj, A-Aj, A-Aj, - A-Aj, -A-Aj, -A+Aj, -A-Aj, -A+Aj, -A+Aj, A+Aj, A-Aj, A+Aj, A-Aj, A+Aj, A-Aj, A-Aj, A+Aj, -A-Aj, A+Aj, A-Aj, A-Aj, A+Aj, -A-Aj, A+Aj, A+Aj, A+Aj, A-Aj, -A-Aj, -A+Aj, A-Aj, A-Aj, A+Aj, -A+Aj, -A-Aj, A-Aj, A+Aj, -A-Aj, A-Aj, -A-Aj, A-Aj, A-Aj, A-Aj, A+Aj, A+Aj, A-Aj, A+Aj, -A-Aj, A-Aj, -A+Aj, A+Aj, -A-Aj |
| | Polarization 2 | A+Aj, -A+Aj, A-Aj, -A-Aj, A-Aj, A+Aj, -A-Aj, A+Aj, -A+Aj, -A-Aj, A-Aj, -A+Aj, A+Aj, A-Aj, -A+Aj, -A-Aj, A-Aj, -A+Aj, -A-Aj, -A-Aj, A+Aj, -A+Aj, A+Aj, -A+Aj, A-Aj, -A-Aj, A+Aj, A-Aj, A- Aj, A+Aj, A-Aj, -A-Aj, A+Aj, A-Aj, -A-Aj, -A-Aj, A-Aj, -A+Aj, -A+Aj, A-Aj, A+Aj, A+Aj, -A+Aj, -A-Aj, A+Aj, -A+Aj, -A-Aj, - A-Aj, A-Aj, A+Aj, A+Aj, A+Aj, -A-Aj, -A+Aj, A-Aj, A+Aj, -A+Aj, -A+Aj, A-Aj, -A-Aj, A-Aj, A-Aj, -A-Aj, -A+Aj, -A-Aj, A-Aj, -A+Aj, A+Aj, A+Aj, -A-Aj, A-Aj, A-Aj, A-Aj, -A-Aj, -A+Aj, -A-Aj, A-Aj, -A+Aj, A-Aj, A+Aj, A+Aj, -A-Aj, -A+Aj, - A+Aj, -A+Aj, A+Aj, -A-Aj, A+Aj, -A-Aj, -A-Aj, -A+Aj, A+Aj, -A-Aj, -A+Aj, -A-Aj, A-Aj, A-Aj, -A-Aj, - A+Aj, A-Aj, -A+Aj, -A+Aj, A+Aj, -A+Aj, A+Aj, A+Aj, A-Aj, A-Aj, -A-Aj |

**Table 30-2**

| Index | Polarization | Pilot sequence |
|---|---|---|
| 1 | Polarization 1 | -A-Aj, -A-Aj, -A+Aj, -A+Aj, -A-Aj, A+Aj, A+Aj, A-Aj, -A-Aj, -A+Aj, A+Aj, -A+Aj, -A+Aj, A-Aj, A-Aj, A-Aj, -A-Aj, A-Aj, -A-Aj, -A-Aj, -A+Aj, A-Aj, -A-Aj, A-Aj, A-Aj, A+Aj, A+Aj, A-Aj, A-Aj, -A+Aj, A-Aj, A+Aj, -A-Aj, A+Aj, A+Aj, -A-Aj, -A-Aj, -A-Aj, -A+Aj, -A-Aj, -A-Aj, A+Aj, -A-Aj, A-Aj, A-Aj, A+Aj, -A-Aj, -A+Aj, -A-Aj, A-Aj, -A-Aj, A-Aj, A-Aj, -A-Aj, -A-Aj, -A-Aj, -A+Aj, A+Aj, A+Aj, -A+Aj, A+Aj, -A-Aj, A+Aj, -A+Aj, A+Aj, A-Aj, -A-Aj, A+Aj, A+Aj, -A-Aj, A+Aj, A+Aj, A+Aj, A+Aj, A-Aj, A-Aj, A-Aj, -A+Aj, -A+Aj, A+Aj, -A+Aj, A-Aj, A-Aj, A+Aj, A+Aj, -A+Aj, -A+Aj, A+Aj, -A+Aj, -A+Aj, -A+Aj, -A+Aj, -A-Aj, A+Aj, -A-Aj, -A+Aj, A-Aj, A-Aj, -A+Aj, -A-Aj, A+Aj, -A+Aj, -A+Aj, A-Aj |
| | Polarization 2 | A+Aj, -A-Aj, -A-Aj, A+Aj, A-Aj, A-Aj, A+Aj, -A+Aj, -A+Aj, -A-Aj, -A+Aj, -A-Aj, -A-Aj, -A-Aj, A+Aj, -A-Aj, -A+Aj, -A+Aj, -A+Aj, A+Aj, A+Aj, -A+Aj, -A-Aj, A+Aj, -A+Aj, A-Aj, -A+Aj, A+Aj, A-Aj, -A-Aj, -A-Aj, -A-Aj, A-Aj, -A-Aj, -A+Aj, A-Aj, -A+Aj, -A+Aj, -A+Aj, A-Aj, -A-Aj, A-Aj, -A+Aj, -A-Aj, -A+Aj, - A+Aj, -A-Aj, -A-Aj, -A-Aj, -A-Aj, A+Aj, A+Aj, A-Aj, A+Aj, A-Aj, -A+Aj, A-Aj, A+Aj, A+Aj, -A-Aj, - A+Aj, A+Aj, A-Aj, -A+Aj, A+Aj, A+Aj, A+Aj, A+Aj, -A+Aj, -A+Aj, -A-Aj, A-Aj, A+Aj, A-Aj, A+Aj, - A+Aj, -A+Aj, A+Aj, A-Aj, A-Aj, A+Aj, A-Aj, A-Aj, A-Aj, A-Aj, A-Aj, -A+Aj, A-Aj, -A-Aj, A+Aj, -A+Aj, - A-Aj, A-Aj, -A+Aj, A-Aj, A-Aj, A+Aj, -A-Aj, A-Aj, A+Aj, A-Aj, A+Aj, -A-Aj, A+Aj |
| 2 | Polarization 1 | -A-Aj, -A-Aj, -A+Aj, -A+Aj, -A-Aj, A+Aj, A+Aj, A-Aj, -A-Aj, -A+Aj, A+Aj, -A+Aj, -A+Aj, A-Aj, A-Aj, A-Aj, -A-Aj, A-Aj, -A-Aj, -A-Aj, -A+Aj, A-Aj, -A-Aj, A-Aj, A-Aj, A+Aj, A+Aj, A-Aj, A-Aj, -A+Aj, A-Aj, A+Aj, -A-Aj, A+Aj, A+Aj, -A-Aj, -A-Aj, -A-Aj, -A+Aj, -A-Aj, -A-Aj, A+Aj, -A-Aj, A-Aj, A-Aj, A+Aj, -A-Aj, -A+Aj, -A-Aj, A-Aj, -A-Aj, A-Aj, A-Aj, -A-Aj, -A-Aj, -A-Aj, -A+Aj, A+Aj, A+Aj, -A+Aj, A+Aj, -A-Aj, A+Aj, -A+Aj, A+Aj, A-Aj, -A-Aj, A+Aj, A+Aj, -A-Aj, A+Aj, A+Aj, A+Aj, A+Aj, A-Aj, A-Aj, A-Aj, -A+Aj, -A+Aj, A+Aj, -A+Aj, A-Aj, A-Aj, A+Aj, A+Aj, -A+Aj, -A+Aj, A+Aj, -A+Aj, -A+Aj, -A+Aj, -A+Aj, -A-Aj, A+Aj, -A-Aj, -A+Aj, A-Aj, A-Aj, -A+Aj, -A-Aj, A+Aj, -A+Aj, -A+Aj, A-Aj |
| | Polarization 2 | -A+Aj, A+Aj, A+Aj, A-Aj, A+Aj, -A+Aj, A-Aj, -A-Aj, -A-Aj, -A+Aj, -A+Aj, A+Aj, -A-Aj, -A+Aj, -A+Aj, A-Aj, -A-Aj, -A+Aj, A-Aj, A-Aj, A-Aj, A+Aj, -A+Aj, A-Aj, A+Aj, A+Aj, A+Aj, A-Aj, -A+Aj, -A+Aj, A+Aj, A-Aj, -A+Aj, -A-Aj, -A+Aj, -A-Aj, A+Aj, -A-Aj, A-Aj, -A+Aj, -A-Aj, A-Aj, A-Aj, A+Aj, A-Aj, A-Aj, A+Aj, A-Aj, -A+Aj, -A+Aj, -A-Aj, -A+Aj, A+Aj, A+Aj, A-Aj, -A-Aj, A-Aj, -A-Aj, -A+Aj, -A+Aj, A+Aj, -A+Aj, A-Aj, -A-Aj, -A-Aj, A-Aj, -A-Aj, A-Aj, -A+Aj, A+Aj, A-Aj, A+Aj, A+Aj, A-Aj, -A+Aj, A-Aj, -A-Aj, -A-Aj, A-Aj, A-Aj, - A+Aj, A+Aj, A+Aj, -A-Aj, -A-Aj, A+Aj, A-Aj, A-Aj, A+Aj, -A+Aj, -A+Aj |
| 3 | Polarization 1 | -A+Aj, A-Aj, A-Aj, A+Aj, -A-Aj, A-Aj, -A+Aj, -A+Aj, A-Aj, -A-Aj, A+Aj, -A-Aj, A-Aj, A-Aj, A-Aj, A-Aj, A+Aj, A-Aj, A-Aj, A+Aj, A+Aj, -A+Aj, -A+Aj, A-Aj, A+Aj, A-Aj, A-Aj, -A+Aj, -A+Aj, -A+Aj, A+Aj, A+Aj, A+Aj, A+Aj, -A-Aj, A+Aj, A+Aj, -A-Aj, -A+Aj, A+Aj, A-Aj, A+Aj, -A-Aj, A+Aj, A-Aj, A+Aj, A+Aj, A-Aj, -A-Aj, -A-Aj, -A-Aj, -A+Aj, -A+Aj, -A-Aj, -A+Aj, -A-Aj, A-Aj, -A-Aj, A+Aj, -A+Aj, -A+Aj, -A-Aj, A+Aj, -A-Aj, -A-Aj, A-Aj, -A-Aj, -A-Aj, -A-Aj, A+Aj, A+Aj, -A-Aj, A+Aj, -A+Aj, A-Aj, -A+Aj, -A+Aj, A+Aj, A+Aj, -A+Aj, -A+Aj, -A-Aj, -A+Aj, A-Aj, -A-Aj, -A-Aj, -A+Aj, -A-Aj, -A+Aj, -A+Aj, -A+Aj, A-Aj, A-Aj, A+Aj, A-Aj, -A-Aj, -A+Aj, A+Aj, A+Aj, -A-Aj, A-Aj, A-Aj, -A-Aj, -A-Aj |
| | Polarization 2 | A-Aj, A-Aj, A+Aj, -A+Aj, -A+Aj, A+Aj, -A-Aj, -A-Aj, A+Aj, A+Aj, A-Aj, -A+Aj, -A+Aj, -A-Aj, -A-Aj, - A+Aj, A-Aj, -A+Aj, A+Aj, A+Aj, -A+Aj, A+Aj, A-Aj, -A+Aj, -A-Aj, -A+Aj, -A-Aj, -A-Aj, A-Aj, A+Aj, A+Aj, -A-Aj, -A-Aj, A-Aj, A-Aj, A-Aj, -A-Aj, -A+Aj, A-Aj, -A-Aj, A-Aj, A+Aj, -A-Aj, A+Aj, -A-Aj, -A+Aj, A+Aj, -A-Aj, -A+Aj, -A-Aj, -A+Aj, A+Aj, A+Aj, A-Aj, -A-Aj, A-Aj, A-Aj, -A+Aj, A+Aj, -A+Aj, -A+Aj, - A+Aj, -A-Aj, A-Aj, -A+Aj, -A-Aj, A+Aj, -A-Aj, A-Aj, -A-Aj, -A-Aj, A-Aj, -A+Aj, A+Aj, A-Aj, A-Aj, - A+Aj, A+Aj, A+Aj, A+Aj, -A+Aj, A-Aj, A+Aj, -A+Aj, -A+Aj, -A+Aj, A-Aj, -A-Aj, -A+Aj, A-Aj, A-Aj, -A-Aj, A+Aj, A-Aj, A-Aj, -A-Aj, -A-Aj, -A+Aj, A-Aj, A+Aj, -A+Aj, A+Aj, A+Aj, A-Aj |

**EP 4 531 356 B1**

(continued)

| Index | Polarization | Pilot sequence |
|---|---|---|
| 4 | Polarization 1 | -A+Aj, A-Aj, A-Aj, A+Aj, -A-Aj, A-Aj, -A+Aj, -A+Aj, A-Aj, -A-Aj, A+Aj, -A-Aj, A-Aj, A-Aj, A-Aj, A-Aj, A+Aj, A-Aj, A-Aj, A+Aj, A+Aj, -A+Aj, -A+Aj, A-Aj, A+Aj, A-Aj, A-Aj, -A+Aj, -A+Aj, -A+Aj, A+Aj, A+Aj, A+Aj, A+Aj, -A-Aj, A+Aj, A+Aj, -A-Aj, -A+Aj, A+Aj, A-Aj, A+Aj, -A-Aj, A+Aj, A-Aj, A+Aj, A+Aj, A-Aj, -A-Aj, -A-Aj, A-Aj, -A+Aj, -A+Aj, -A-Aj, -A+Aj, -A-Aj, A-Aj, -A-Aj, A+Aj, -A+Aj, -A+Aj, -A-Aj, A+Aj, -A-Aj, -A-Aj, A-Aj, -A-Aj, -A-Aj, -A-Aj, A+Aj, A+Aj, -A-Aj, A+Aj, -A+Aj, A-Aj, -A+Aj, -A+Aj, A+Aj, A+Aj, -A+Aj, -A+Aj, -A-Aj, -A+Aj, A-Aj, -A-Aj, -A-Aj, -A+Aj, -A-Aj, -A+Aj, -A+Aj, -A+Aj, A-Aj, A-Aj, A+Aj, A-Aj, -A-Aj, -A+Aj, A+Aj, A+Aj, -A-Aj, A-Aj, A-Aj, -A-Aj, -A-Aj |
| | Polarization 2 | A-Aj, A+Aj, -A+Aj, -A+Aj, A+Aj, -A-Aj. -A-Aj, A+Aj, A+Aj, A-Aj, -A+Aj, -A+Aj, -A-Aj, -A-Aj, -A+Aj, A-Aj, -A+Aj, A+Aj, A+Aj, -A+Aj, A+Aj, A-Aj, -A+Aj, -A-Aj, -A+Aj, -A-Aj, -A-Aj, A-Aj, A+Aj, A+Aj, -A-Aj, -A-Aj, A-Aj, A-Aj, A-Aj, -A-Aj, -A+Aj, A-Aj, -A-Aj, A-Aj, A+Aj, -A-Aj, A+Aj, -A-Aj, -A+Aj, A+Aj, -A-Aj, -A+Aj, -A-Aj, -A+Aj, A+Aj, A+Aj, A-Aj. -A-Aj, A-Aj, A-Aj, -A+Aj, A+Aj, -A+Aj, -A+Aj, -A+Aj, -A-Aj, A-Aj, -A+Aj, -A-Aj, A+Aj, -A-Aj, A-Aj, -A-Aj, -A-Aj, A-Aj, -A+Aj, A+Aj, A-Aj, A-Aj, -A+Aj, A+Aj, A+Aj, A+Aj, -A+Aj, A-Aj, A+Aj, -A+Aj, -A+Aj, -A+Aj, A-Aj, -A-Aj, -A+Aj, A-Aj, A-Aj, -A-Aj, A+Aj, A-Aj, A-Aj, -A-Aj, -A-Aj, -A+Aj, A-Aj, A+Aj, -A+Aj, A+Aj, A+Aj, A-Aj, A-Aj |

**Table 30-3**

| Index | Pilot sequence |
|---|---|
| 1 | -A-Aj, -A+Aj, A+Aj, -A+Aj, -A-Aj, A-Aj, A+Aj, -A+Aj, A+Aj, A+Aj, -A-Aj, A-Aj, -A+Aj, -A-Aj, A-Aj, A-Aj, - A-Aj, -A-Aj, A-Aj, A+Aj, -A-Aj, A-Aj, -A-Aj, -A+Aj, -A+Aj, A+Aj, A+Aj, A-Aj, -A+Aj, A+Aj, A+Aj, -A+Aj, A+Aj, A-Aj, -A+Aj, -A+Aj, -A-Aj, A+Aj, -A-Aj. -A+Aj, -A-Aj, A+Aj, -A+Aj, -A-Aj, A+Aj, A-Aj, A-Aj, A-Aj, - A-Aj, A-Aj, -A+Aj, -A+Aj, A+Aj, -A+Aj, -A+Aj, A+Aj, -A-Aj, -A-Aj, -A-Aj, -A+Aj, A+Aj, A-Aj, A-Aj, A+Aj, - A+Aj, -A+Aj, -A-Aj, A-Aj, -A+Aj, A-Aj, -A+Aj. -A-Aj, A+Aj, A+Aj, A+Aj, -A+Aj, -A+Aj, -A+Aj, A+Aj, A-Aj, A+Aj, A-Aj, A-Aj, -A-Aj, A+Aj, -A-Aj, A-Aj, A-Aj, A-Aj, A+Aj, -A-Aj, -A-Aj, A+Aj, A+Aj, A-Aj, -A-Aj, A-Aj, -A-Aj, -A-Aj, -A-Aj, -A-Aj, A-Aj, -A+Aj, A+Aj |
| 2 | -A-Aj, A+Aj, A-Aj, -A-Aj, A-Aj, A+Aj, -A+Aj, -A-Aj, A-Aj, -A-Aj, -A-Aj, A+Aj, -A+Aj, A-Aj, A+Aj, -A+Aj, - A+Aj, A+Aj, A+Aj, -A+Aj, -A-Aj, A+Aj, -A+Aj, A+Aj, A-Aj, A-Aj, -A-Aj, -A-Aj, -A+Aj, A-Aj, -A-Aj, -A-Aj, A-Aj, -A-Aj, -A+Aj, A-Aj, A-Aj, A+Aj, -A-Aj, A+Aj, A-Aj, A+Aj, -A-Aj, A-Aj, A+Aj, -A-Aj, -A+Aj, -A+Aj, - A+Aj, A+Aj, -A+Aj, A-Aj, A-Aj, -A-Aj, A-Aj, A-Aj, -A-Aj, A+Aj, A+Aj, A+Aj, A-Aj, -A-Aj, -A+Aj, -A+Aj, -A-Aj, A-Aj, A-Aj, A+Aj, -A+Aj, A-Aj, -A+Aj, A-Aj, A+Aj, -A-Aj, -A-Aj, -A-Aj, A-Aj, A-Aj, A-Aj, -A-Aj, -A+Aj, -A-Aj, -A+Aj, -A+Aj, A+Aj, -A-Aj, A+Aj, -A+Aj, -A+Aj, -A+Aj, -A-Aj, A+Aj, A+Aj, -A-Aj, -A-Aj, -A+Aj, A+Aj, -A+Aj, A+Aj, A+Aj, A+Aj, A+Aj, -A+Aj, A-Aj |
| 3 | -A+Aj, A+Aj, -A+Aj, -A-Aj, A-Aj, A+Aj, -A+Aj, A+Aj, A+Aj, -A-Aj, A-Aj, -A+Aj, -A-Aj, A-Aj, A-Aj, -A-Aj, - A-Aj, A-Aj, A+Aj, -A-Aj, A-Aj, -A-Aj, -A+Aj, -A+Aj, A+Aj, A+Aj, A-Aj, -A+Aj, A+Aj, A+Aj, -A+Aj, A+Aj, A-Aj, -A+Aj, -A+Aj, -A-Aj, A+Aj, -A-Aj, -A+Aj, -A-Aj, A+Aj, -A+Aj, -A-Aj, A+Aj, A-Aj, A-Aj, A-Aj, -A-Aj, A-Aj, -A+Aj, -A+Aj, A+Aj, -A+Aj, -A+Aj, A+Aj, -A-Aj, -A-Aj, -A-Aj, -A+Aj, A+Aj, A-Aj, A-Aj, A+Aj, -A+Aj, -A+Aj, -A-Aj, A-Aj, -A+Aj, A-Aj, -A+Aj, -A-Aj, A+Aj, A+Aj, A+Aj, -A+Aj, -A+Aj, -A+Aj, A+Aj, A-Aj, A+Aj, A-Aj, A-Aj, -A-Aj, A+Aj, -A-Aj, -A-Aj, A+Aj, A+Aj, A-Aj, -A-Aj, A-Aj, -A-Aj, -A-Aj, -A-Aj, -A-Aj, A-Aj, -A+Aj, A+Aj, -A-Aj |
| 4 | A-Aj, -A-Aj, A-Aj, A+Aj, -A+Aj, -A-Aj, A-Aj, -A-Aj, -A-Aj, A+Aj, -A+Aj, A-Aj, A+Aj, -A+Aj, -A+Aj, A+Aj, A+Aj, -A+Aj, -A-Aj, A+Aj, -A+Aj, A+Aj, A-Aj, A-Aj, -A-Aj, -A-Aj, -A+Aj, A-Aj, -A-Aj, -A-Aj, A-Aj, -A-Aj, - A+Aj, A-Aj, A-Aj, A+Aj, -A-Aj, A+Aj, A-Aj, A+Aj, -A-Aj, A-Aj, A+Aj, -A-Aj, -A+Aj, -A+Aj, -A+Aj, A+Aj, - A+Aj, A-Aj, A-Aj, -A-Aj, A-Aj, A-Aj, -A-Aj, A+Aj, A+Aj, A+Aj, A-Aj, -A-Aj, -A+Aj, -A+Aj, -A-Aj, A-Aj, A-Aj, A+Aj, -A+Aj, A-Aj, -A+Aj, A-Aj, A+Aj, -A-Aj, -A-Aj, -A-Aj, A-Aj, A-Aj, A-Aj, -A-Aj, -A+Aj, -A-Aj, - A+Aj, -A+Aj, A+Aj, -A-Aj, A+Aj, -A+Aj, -A+Aj, -A+Aj, -A-Aj, A+Aj, A+Aj, -A-Aj, -A-Aj, -A+Aj, A+Aj, - A+Aj, A+Aj, A+Aj, A+Aj, A+Aj, -A+Aj, A-Aj, -A-Aj, A+Aj |

**163**

(continued)

| Index | Pilot sequence |
|---|---|
| 5 | A+Aj, -A-Aj, -A+Aj, A+Aj, -A+Aj, -A-Aj, A-Aj. A+Aj, -A+Aj, A+Aj, A+Aj, -A-Aj, A-Aj, -A+Aj, -A-Aj, A-Aj, -A-Aj, -A-Aj, A-Aj, A+Aj, -A-Aj, A-Aj, -A-Aj, -A+Aj, -A+Aj, A+Aj, A+Aj, A-Aj, -A+Aj, A+Aj, A+Aj, - A+Aj, A+Aj, A-Aj, -A+Aj, -A+Aj, -A-Aj, A+Aj, -A-Aj, -A+Aj, -A-Aj, A+Aj, -A+Aj, -A-Aj, A+Aj, A-Aj, A-Aj, A-Aj, -A-Aj, A-Aj, -A+Aj, -A+Aj, A+Aj, -A+Aj. -A+Aj, A+Aj, -A-Aj, -A-Aj, -A-Aj, -A+Aj, A+Aj, A-Aj, A-Aj, A+Aj, -A+Aj, -A+Aj, -A-Aj, A-Aj, -A+Aj, A-Aj. -A+Aj, -A-Aj, A+Aj, A+Aj, A+Aj, -A+Aj, -A+Aj, -A+Aj, A+Aj, A-Aj, A+Aj, A-Aj, A-Aj, -A-Aj, A+Aj, -A-Aj, A-Aj, A-Aj, A-Aj, A+Aj, -A-Aj, -A-Aj, A+Aj, A+Aj, A-Aj, -A-Aj, A-Aj, -A-Aj, -A-Aj, -A-Aj, -A-Aj, A-Aj, -A+Aj |
| 6 | A+Aj, A-Aj, -A-Aj, A-Aj, A+Aj, -A+Aj, -A-Aj, A-Aj, -A-Aj, -A-Aj, A+Aj, -A+Aj, A-Aj, A+Aj, -A+Aj, -A+Aj, A+Aj, A+Aj, -A+Aj, -A-Aj, A+Aj, -A+Aj, A+Aj, A-Aj, A-Aj, -A-Aj, -A-Aj, -A+Aj, A-Aj, -A-Aj, -A-Aj, A-Aj, - A-Aj, -A+Aj, A-Aj, A-Aj, A+Aj, -A-Aj, A+Aj, A-Aj, A+Aj, -A-Aj, A-Aj, A+Aj, -A-Aj, -A+Aj, -A+Aj, -A+Aj, A+Aj, -A+Aj, A-Aj, A-Aj, -A-Aj, A-Aj, A-Aj, -A-Aj, A+Aj, A+Aj, A+Aj, A-Aj, -A-Aj, -A+Aj, -A+Aj, -A-Aj, A-Aj, A-Aj, A+Aj, -A+Aj, A-Aj, -A+Aj, A-Aj, A+Aj, -A-Aj, -A-Aj, -A-Aj, A-Aj, A-Aj, A-Aj, -A-Aj, -A+Aj, -A-Aj, -A+Aj, -A+Aj, A+Aj, -A-Aj, A+Aj, -A+Aj, -A+Aj, -A+Aj, -A-Aj, A+Aj, A+Aj, -A-Aj, -A-Aj, -A+Aj, A+Aj, - A+Aj, A+Aj, A+Aj, A+Aj, A+Aj, -A+Aj, A-Aj, -A-Aj |

**Table 30-4**

| Index | Pilot sequence |
|---|---|
| 1 | -A-Aj, A-Aj, -A-Aj, -A+Aj, A+Aj, A-Aj, -A-Aj, A-Aj, A-Aj, -A+Aj, A+Aj, -A-Aj, -A+Aj, A+Aj, A+Aj, -A+Aj, - A+Aj, A+Aj, A-Aj, -A+Aj, A+Aj, -A+Aj, -A-Aj, -A-Aj, A-Aj, A-Aj, A+Aj, -A-Aj, A-Aj, A-Aj, -A-Aj, A-Aj, A+Aj, -A-Aj, -A-Aj, -A+Aj, A-Aj, -A+Aj, -A-Aj, -A+Aj, A-Aj, -A-Aj, -A+Aj, A-Aj, A+Aj, A+Aj, A+Aj, -A+Aj, A+Aj, -A-Aj, -A-Aj, A-Aj, -A-Aj, -A-Aj, A-Aj, -A+Aj, -A+Aj, -A+Aj, -A-Aj, A-Aj, A+Aj, A+Aj, A-Aj, -A-Aj, - A-Aj, -A+Aj, A+Aj, -A-Aj, A+Aj, -A-Aj, -A+Aj, A-Aj, A-Aj, A-Aj, -A-Aj, -A-Aj, -A-Aj, A-Aj, A+Aj, A-Aj, A+Aj, A+Aj, -A+Aj, A-Aj, -A+Aj, A+Aj, A+Aj, A+Aj, A-Aj, -A+Aj, -A+Aj, A-Aj, A-Aj, A+Aj, -A+Aj, A+Aj, - A+Aj, -A+Aj, -A+Aj, -A+Aj, A+Aj, -A-Aj, A-Aj, -A+Aj |
| 2 | -A+Aj, -A-Aj, A-Aj, -A-Aj, -A+Aj, A+Aj, A-Aj, -A-Aj, A-Aj, A-Aj, -A+Aj, A+Aj, -A-Aj, -A+Aj, A+Aj, A+Aj, - A+Aj, -A+Aj, A+Aj, A-Aj, -A+Aj, A+Aj, -A+Aj, -A-Aj, -A-Aj, A-Aj, A-Aj, A+Aj, -A-Aj, A-Aj, A-Aj, -A-Aj, A-Aj, A+Aj, -A-Aj, -A-Aj, -A+Aj, A-Aj, -A+Aj, -A-Aj, -A+Aj, A-Aj, -A-Aj, -A+Aj, A-Aj, A+Aj, A+Aj, A+Aj, - A+Aj, A+Aj, -A-Aj, -A-Aj, A-Aj, -A-Aj, -A-Aj, A-Aj, -A+Aj, -A+Aj, -A-Aj, A-Aj, A+Aj, A+Aj, A-Aj, - A-Aj, -A-Aj, -A+Aj, A+Aj, -A-Aj, A+Aj, -A-Aj, -A+Aj, A-Aj, A-Aj, A-Aj, -A-Aj, -A-Aj, -A-Aj, A-Aj, A+Aj, A-Aj, A+Aj, A+Aj, -A+Aj, A- Aj, -A+Aj, A+Aj, A+Aj, A+Aj, A-Aj, -A+Aj, -A+Aj, A-Aj, A-Aj, A+Aj, -A+Aj, A+Aj, -A+Aj, -A+Aj, -A+Aj, -A+Aj, A+Aj, -A-Aj, A-Aj |
| 3 | -A+Aj, A-Aj, A+Aj, -A+Aj, A+Aj, A-Aj, -A-Aj, -A+Aj, A+Aj, -A+Aj, -A+Aj, A-Aj, -A-Aj, A+Aj, A-Aj, -A-Aj, - A-Aj, A-Aj, A-Aj, -A-Aj, -A+Aj, A-Aj, -A-Aj, A-Aj, A+Aj, A+Aj, -A+Aj, -A+Aj, -A-Aj, A+Aj, -A+Aj, -A+Aj, A+Aj, -A+Aj, -A-Aj, A+Aj, A+Aj, A-Aj, -A+Aj, A-Aj, A+Aj, A-Aj, -A+Aj, A+Aj, A-Aj, -A+Aj, -A-Aj, -A-Aj, - A-Aj, A-Aj, -A-Aj, A+Aj, A+Aj, -A+Aj, A+Aj, A+Aj, -A+Aj, A-Aj, A-Aj, A-Aj, A+Aj, -A+Aj, -A-Aj, -A-Aj, - A+Aj, A+Aj, A+Aj, A-Aj, -A-Aj, A+Aj, -A-Aj, A+Aj, A-Aj, -A+Aj, -A+Aj, -A+Aj, A+Aj, A+Aj, A+Aj, -A+Aj, - A-Aj, -A+Aj, -A-Aj, -A-Aj, A- Aj, -A+Aj, A-Aj, -A-Aj, -A-Aj, -A-Aj, -A+Aj, A-Aj, A-Aj, -A+Aj, -A+Aj, -A-Aj, A-Aj, -A-Aj, A-Aj, A-Aj, A-Aj, A-Aj, -A-Aj, A+Aj |
| 4 | A-Aj, -A+Aj, -A-Aj, A-Aj, -A-Aj, -A+Aj, A+Aj, A-Aj, -A-Aj, A-Aj, A-Aj, -A+Aj, A+Aj, -A-Aj, -A+Aj, A+Aj, A+Aj, -A+Aj, -A+Aj, A+Aj, A-Aj, -A+Aj, A+Aj, -A+Aj, -A-Aj, -A-Aj, A-Aj, A-Aj, A+Aj, -A-Aj, A-Aj, A-Aj, - A-Aj, A-Aj, A+Aj, -A-Aj, -A-Aj, -A+Aj, A-Aj, -A+Aj, -A-Aj, -A+Aj, A-Aj, -A-Aj, -A+Aj, A-Aj, A+Aj, A+Aj, A+Aj, -A+Aj, A+Aj, -A-Aj, -A-Aj, A-Aj, -A-Aj, -A-Aj, A-Aj, -A+Aj, -A+Aj, -A+Aj, -A-Aj, A-Aj, A+Aj, A+Aj, A-Aj, -A-Aj, -A-Aj, -A+Aj, A+Aj, -A-Aj, A+Aj, -A-Aj, -A+Aj, A-Aj, A-Aj, A-Aj, -A-Aj, -A-Aj, -A-Aj, A-Aj, A+Aj, A-Aj, A+Aj, A+Aj, -A+Aj, A- Aj, -A+Aj, A+Aj, A+Aj, A+Aj, A-Aj, -A+Aj, -A+Aj, A-Aj, A-Aj, A+Aj, - A+Aj, A+Aj, -A+Aj, -A+Aj, -A+Aj, -A+Aj, A+Aj, -A-Aj |

(continued)

| Index | Pilot sequence |
|---|---|
| 5 | A-Aj, A+Aj, -A+Aj, A+Aj, A-Aj, -A-Aj, -A+Aj, A+Aj, -A+Aj, -A+Aj, A-Aj, -A-Aj, A+Aj, A-Aj, -A-Aj, -A-Aj, A-Aj, A-Aj, -A-Aj, -A+Aj, A-Aj, -A-Aj, A-Aj, A+Aj, A+Aj, -A+Aj, -A+Aj, -A-Aj, A+Aj, -A+Aj, -A+Aj, A+Aj, - A+Aj, -A-Aj, A+Aj, A+Aj, A-Aj, -A+Aj, A-Aj, A+Aj, A-Aj, -A+Aj, A+Aj, A-Aj, -A+Aj, -A-Aj, -A-Aj, -A-Aj, A-Aj, -A-Aj, A+Aj, A+Aj, -A+Aj, A+Aj, A+Aj, -A+Aj, A-Aj, A-Aj, A-Aj, A+Aj, -A+Aj, -A-Aj, -A-Aj, -A+Aj, A+Aj, A+Aj, A-Aj, -A-Aj, A+Aj, -A-Aj, A+Aj, A-Aj, -A+Aj, -A+Aj, -A+Aj, A+Aj, A+Aj, A+Aj, -A+Aj, -A-Aj, -A+Aj, -A-Aj, -A-Aj, A-Aj, -A+Aj, A-Aj, -A-Aj, -A-Aj, -A-Aj, -A+Aj, A-Aj, A-Aj, -A+Aj, -A+Aj, -A-Aj, A-Aj, - A-Aj, A-Aj, A-Aj, A-Aj, A-Aj, -A-Aj, A+Aj, -A+Aj |
| 6 | A+Aj, -A+Aj, A+Aj, A-Aj, -A-Aj, -A+Aj, A+Aj, -A+Aj, -A+Aj, A-Aj, -A-Aj, A+Aj, A-Aj, -A-Aj, -A-Aj, A-Aj, A-Aj, -A-Aj, -A+Aj, A-Aj, -A-Aj, A-Aj, A+Aj, A+Aj, -A+Aj, -A+Aj, -A-Aj, A+Aj, -A+Aj, -A+Aj, A+Aj, -A+Aj, -A-Aj, A+Aj, A+Aj, A-Aj, -A+Aj, A-Aj, A+Aj, A-Aj, -A+Aj, A+Aj, A-Aj, -A+Aj, -A-Aj, -A-Aj, -A-Aj, A-Aj, - A-Aj, A+Aj, A+Aj, -A+Aj, A+Aj, A+Aj, -A+Aj, A-Aj, A-Aj, A-Aj, A+Aj, -A+Aj, -A-Aj, -A-Aj, -A+Aj, A+Aj, A+Aj, A-Aj, -A-Aj, A+Aj, -A-Aj, A+Aj, A-Aj, -A+Aj, -A+Aj, -A+Aj, A+Aj, A+Aj, A+Aj, -A+Aj, -A-Aj, -A+Aj, -A-Aj, -A-Aj, A-Aj, -A+Aj, A-Aj, -A-Aj, -A-Aj, -A-Aj, -A+Aj, A-Aj, A-Aj, -A+Aj, -A+Aj, -A-Aj, A-Aj, -A-Aj, A-Aj, A-Aj, A-Aj, A-Aj, -A-Aj, A+Aj, -A+Aj, A-Aj |

**Table 30-5**

| Index | Pilot sequence |
|---|---|
| 1 | -A-Aj, -A+Aj, A-Aj, A+Aj, A+Aj, A+Aj, A+Aj, A-Aj, A+Aj, A-Aj, -A-Aj, -A-Aj, A+Aj, A+Aj, -A-Aj, A-Aj, A-Aj, A-Aj, A+Aj, -A-Aj, A+Aj, A-Aj, A-Aj, -A-Aj, A-Aj, -A-Aj, -A+Aj, -A+Aj, -A+Aj, -A-Aj, -A-Aj, -A-Aj, A+Aj, - A+Aj, A-Aj, -A+Aj, A-Aj, A+Aj, -A+Aj, -A+Aj, -A-Aj, A-Aj, A-Aj, -A-Aj, -A+Aj, A+Aj, A+Aj, A+Aj, -A-Aj, - A+Aj, -A+Aj, -A-Aj, -A+Aj, -A+Aj, A-Aj, A+Aj, A-Aj, A-Aj, A-Aj, -A-Aj, A+Aj, -A+Aj, -A-Aj, A+Aj, -A+Aj, A+Aj, -A-Aj, A+Aj, -A+Aj, -A+Aj, A-Aj, -A-Aj, -A+Aj, -A-Aj, -A-Aj, -A+Aj, A-Aj, -A-Aj, -A-Aj, -A+Aj, -A+Aj, A+Aj, A-Aj, A+Aj, -A-Aj, A-Aj, A+Aj, A+Aj, A-Aj, A-Aj, A+Aj, -A+Aj, A-Aj, A+Aj, -A-Aj, -A-Aj, -A+Aj, -A-Aj, A-Aj, A+Aj, -A+Aj, -A-Aj, -A+Aj, A+Aj |
| 2 | -A-Aj, A+Aj, A-Aj, -A+Aj, -A-Aj, -A-Aj, -A-Aj, -A-Aj, -A+Aj, -A-Aj, -A+Aj, A+Aj, A+Aj, -A-Aj, -A-Aj, A+Aj, - A+Aj, -A+Aj, -A+Aj, -A-Aj, A+Aj, -A-Aj, -A+Aj, -A+Aj, A+Aj, -A+Aj, A+Aj, A-Aj, A-Aj, A-Aj, A+Aj, A+Aj, A+Aj, -A-Aj, A-Aj, -A+Aj, A-Aj, -A+Aj, -A-Aj, A-Aj, A-Aj, A+Aj, -A+Aj, -A+Aj, A+Aj, A-Aj, -A-Aj, -A-Aj, -A-Aj, A+Aj, A-Aj, A-Aj, A+Aj, A-Aj, A-Aj, -A+Aj, -A-Aj, -A+Aj, -A+Aj, -A+Aj, A+Aj, -A-Aj, A-Aj, A+Aj, -A-Aj, A-Aj, -A-Aj, A+Aj, -A-Aj, A-Aj, A-Aj, -A+Aj, A+Aj, A-Aj, A+Aj, A+Aj, A-Aj, -A+Aj, A+Aj, A+Aj, A-Aj, A-Aj, -A-Aj, -A+Aj, -A-Aj, A+Aj, -A+Aj, -A-Aj, -A-Aj, -A+Aj, -A+Aj, -A-Aj, A-Aj, -A+Aj, -A-Aj, A+Aj, A+Aj, A-Aj, A+Aj, -A+Aj, -A-Aj, A-Aj, A+Aj, A-Aj |
| 3 | -A+Aj, A-Aj, A+Aj, A+Aj, A+Aj, A+Aj, A-Aj, A+Aj, A-Aj, -A-Aj, -A-Aj, A+Aj, A+Aj, -A-Aj, A-Aj, A-Aj, A-Aj, A+Aj, -A-Aj, A+Aj, A-Aj, A-Aj, -A-Aj, A-Aj, -A-Aj, -A+Aj, -A+Aj, -A+Aj, -A-Aj, -A-Aj, -A-Aj, A+Aj, -A+Aj, A-Aj, -A+Aj, A-Aj, A+Aj, -A+Aj, -A+Aj, -A-Aj, A-Aj, A-Aj, -A-Aj, -A+Aj, A+Aj, A+Aj, A+Aj, -A-Aj, -A+Aj, -A+Aj, -A- Aj, -A+Aj, -A+Aj, A-Aj, A+Aj, A-Aj, A-Aj, A-Aj, -A-Aj, A+Aj, -A+Aj, -A-Aj, A+Aj, -A+Aj, A+Aj, -A-Aj, A+Aj, -A+Aj, -A+Aj, A-Aj, -A-Aj, -A+Aj, -A-Aj, -A-Aj, -A+Aj, A-Aj, -A-Aj, -A-Aj, -A+Aj, -A+Aj, A+Aj, A-Aj, A+Aj, -A- Aj, A-Aj, A+Aj, A+Aj, A-Aj, A-Aj, A+Aj, -A+Aj, A-Aj, A+Aj, -A-Aj, -A-Aj, -A+Aj, -A-Aj, A-Aj, A+Aj, - A+Aj, -A- Aj, -A+Aj, A+Aj, -A-Aj |
| 4 | A-Aj, -A+Aj, -A-Aj, -A-Aj, -A-Aj, -A-Aj, -A+Aj, -A-Aj, -A+Aj, A+Aj, A+Aj, -A-Aj, -A-Aj, A+Aj, -A+Aj, -A+Aj, - A+Aj, -A-Aj, A+Aj, -A-Aj, -A+Aj, -A+Aj, A+Aj, -A+Aj, A+Aj, A-Aj, A-Aj, A-Aj, A+Aj, A+Aj, A+Aj, -A-Aj, A-Aj, -A+Aj, A-Aj, -A+Aj, -A-Aj, A-Aj, A-Aj, A+Aj, -A+Aj, -A+Aj, A+Aj, A-Aj, -A-Aj, -A-Aj, -A-Aj, A+Aj, A-Aj, A-Aj, A+Aj, A-Aj, A-Aj, -A+Aj, -A-Aj, -A+Aj, -A+Aj, -A+Aj, A+Aj, -A-Aj, A-Aj, A+Aj, -A-Aj, A-Aj, -A-Aj, A+Aj, -A-Aj, A-Aj, A-Aj, -A+Aj, A+Aj, A-Aj, A+Aj, A+Aj, A-Aj, -A+Aj, A+Aj, A+Aj, A-Aj, A-Aj, -A-Aj, -A+Aj, -A-Aj, A+Aj, -A+Aj, -A-Aj, -A-Aj, -A+Aj, -A+Aj, -A-Aj, A-Aj, -A+Aj, -A-Aj, A+Aj, A+Aj, A-Aj, A+Aj, -A+Aj, -A-Aj, A-Aj, A+Aj, A-Aj, -A-Aj, A+Aj |

(continued)

| Index | Pilot sequence |
|---|---|
| 5 | A+Aj, -A-Aj, -A+Aj, A-Aj, A+Aj, A+Aj, A+Aj, A+Aj, A-Aj, A+Aj, A-Aj, -A-Aj, -A-Aj, A+Aj, A+Aj, -A-Aj, A-Aj, A-Aj, A-Aj, A+Aj, -A-Aj, A+Aj, A-Aj, A-Aj, -A-Aj, A-Aj, -A-Aj, -A+Aj, -A+Aj, -A+Aj, -A-Aj, -A-Aj, -A-Aj, A+Aj, -A+Aj, A-Aj, -A+Aj, A-Aj, A+Aj, -A+Aj, -A+Aj, -A-Aj, A-Aj, A-Aj, -A-Aj, -A+Aj, A+Aj, A+Aj, A+Aj, -A-Aj, -A+Aj, -A+Aj, -A-Aj, -A+Aj, -A+Aj, A-Aj, A+Aj, A-Aj, A-Aj, A-Aj, -A-Aj, A+Aj, -A+Aj, -A-Aj, A+Aj, -A+Aj, A+Aj, -A-Aj, A+Aj, -A+Aj, -A+Aj, A-Aj, -A-Aj, -A+Aj, -A-Aj, -A-Aj, -A+Aj, A-Aj, -A-Aj, -A-Aj, -A+Aj, -A+Aj, A+Aj, A-Aj, A+Aj, -A-Aj, A-Aj, A+Aj, A+Aj, A-Aj, A-Aj, A+Aj, -A+Aj, A-Aj, A+Aj, -A-Aj, -A-Aj, -A+Aj, -A-Aj, A-Aj, A+Aj, -A+Aj, -A-Aj, -A+Aj |
| 6 | A+Aj, A-Aj, -A+Aj, -A-Aj, -A-Aj, -A-Aj, -A-Aj, -A+Aj, -A-Aj, -A+Aj, A+Aj, A+Aj, -A-Aj, -A-Aj, A+Aj, -A+Aj, -A+Aj, -A+Aj, -A-Aj, A+Aj, -A-Aj, -A+Aj, -A+Aj, A+Aj, -A+Aj, A+Aj, A-Aj, A-Aj, A-Aj, A+Aj, A+Aj, A+Aj, -A-Aj, A-Aj, -A+Aj, A-Aj, -A+Aj, -A-Aj, A-Aj, A-Aj, A+Aj, -A+Aj, -A+Aj, A+Aj, A-Aj, -A-Aj, -A-Aj, -A-Aj, A+Aj, A-Aj, -A-Aj, A-Aj, A-Aj, -A+Aj, A+Aj, A-Aj, A+Aj, A+Aj, A-Aj, -A+Aj, A+Aj, A+Aj, A-Aj, A-Aj, -A-Aj, -A+Aj, - A-Aj, A+Aj, -A+Aj, -A-Aj, -A-Aj, -A+Aj, -A+Aj, -A-Aj, A-Aj, -A+Aj, -A-Aj, A+Aj, A+Aj, A-Aj, A+Aj, -A+Aj, -A-Aj, A-Aj, A+Aj, A-Aj, -A-Aj |

Table 30-6

| Index | Pilot sequence |
|---|---|
| 1 | -A-Aj, A+Aj, A-Aj, A-Aj, A-Aj, A-Aj, A+Aj, A-Aj, A+Aj, -A+Aj, -A+Aj, A-Aj, A-Aj, -A+Aj, A+Aj, A+Aj, A+Aj, A-Aj, -A+Aj, A-Aj, A+Aj, A+Aj, -A+Aj, A+Aj, -A+Aj, -A-Aj, -A-Aj, -A-Aj, -A+Aj, -A+Aj, -A+Aj, A-Aj, -A-Aj, A+Aj, -A-Aj, A+Aj, A-Aj, -A-Aj, -A-Aj, -A+Aj, A+Aj, A+Aj, -A+Aj, -A-Aj, A-Aj, A-Aj, A-Aj, -A+Aj, -A-Aj, -A-Aj, -A+Aj, -A-Aj, -A-Aj, A+Aj, A-Aj, A+Aj, A+Aj. A+Aj, -A+Aj, A-Aj, -A-Aj, -A+Aj, A-Aj, -A-Aj, A-Aj, -A+Aj, A-Aj, -A-Aj, -A-Aj, A+Aj, -A+Aj, -A-Aj, -A+Aj, -A+Aj, -A-Aj, A+Aj, -A+Aj, -A+Aj, -A-Aj, -A-Aj, A-Aj, A+Aj, A-Aj, -A+Aj, A+Aj, A-Aj, A-Aj, A+Aj, A+Aj, A-Aj, -A-Aj, A+Aj, A-Aj, -A+Aj, -A+Aj, -A-Aj, -A+Aj, A+Aj, A-Aj, -A-Aj, -A+Aj, -A-Aj, A-Aj, -A+Aj |
| 2 | -A+Aj, -A-Aj, A+Aj, A-Aj, A-Aj, A-Aj, A-Aj, A+Aj, A-Aj, A+Aj, -A+Aj, -A+Aj, A-Aj, A-Aj, -A+Aj, A+Aj, A+Aj, A+Aj, A-Aj, -A+Aj, A-Aj, A+Aj, A+Aj, -A+Aj, A+Aj, -A+Aj, -A-Aj, -A-Aj, -A-Aj, -A+Aj, -A+Aj, -A+Aj, A-Aj, - A-Aj, A+Aj, -A-Aj, A+Aj, A-Aj, -A-Aj, -A-Aj, -A+Aj, A+Aj, A+Aj, -A+Aj, -A-Aj, A-Aj, A-Aj, A-Aj, -A+Aj, -A-Aj, -A-Aj, -A+Aj, -A-Aj, -A-Aj, A+Aj, A-Aj, A+Aj, A+Aj, A+Aj, -A+Aj, A-Aj, -A-Aj, -A+Aj, A-Aj, -A-Aj, A-Aj, -A+Aj, A-Aj, -A-Aj, -A-Aj, A+Aj, -A+Aj, -A-Aj, -A+Aj, -A+Aj, -A-Aj, A+Aj, -A+Aj, -A+Aj, -A-Aj, -A-Aj, A-Aj, A+Aj, A-Aj, -A+Aj, A+Aj, A-Aj, A-Aj, A+Aj, A+Aj, A-Aj, -A-Aj, A+Aj, A-Aj, -A+Aj, -A+Aj, -A-Aj, -A+Aj, A+Aj, A-Aj, -A-Aj, -A+Aj, -A-Aj, A-Aj |
| 3 | A-Aj, -A+Aj, -A-Aj, A+Aj, A-Aj, A-Aj, A-Aj, A-Aj, A+Aj, A-Aj, A+Aj, -A+Aj, -A+Aj, A-Aj, A-Aj, -A+Aj, A+Aj, A+Aj, A+Aj, A-Aj, -A+Aj, A-Aj, A+Aj, A+Aj, -A+Aj, A+Aj, -A+Aj, -A-Aj, -A-Aj, -A-Aj, -A+Aj, -A+Aj, -A+Aj, A-Aj, -A-Aj, A+Aj, -A-Aj, A+Aj, A-Aj, -A-Aj, -A-Aj, -A+Aj, A+Aj, A+Aj, -A+Aj, -A-Aj, A-Aj, A-Aj, A-Aj, - A+Aj, -A-Aj, -A-Aj, -A+Aj, -A-Aj, -A-Aj, A+Aj, A-Aj, A+Aj, A+Aj, A+Aj, -A+Aj, A-Aj, -A-Aj, -A+Aj, A-Aj, -A-Aj, A-Aj, -A+Aj, A-Aj, -A-Aj, -A-Aj, A+Aj, -A+Aj, -A-Aj, -A+Aj, -A+Aj, -A-Aj, A+Aj, -A+Aj, -A+Aj, -A-Aj, - A-Aj, A-Aj, A+Aj, A-Aj, -A+Aj, A+Aj, A-Aj, A-Aj, A+Aj, A+Aj, A-Aj, -A-Aj, A+Aj, A-Aj, -A+Aj, -A+Aj, -A-Aj, -A+Aj, A+Aj, A-Aj, -A-Aj, -A+Aj, -A-Aj |
| 4 | A-Aj, -A+Aj, -A-Aj, A+Aj, A-Aj, A-Aj, A-Aj, A-Aj, A+Aj, A-Aj, A+Aj, -A+Aj, -A+Aj, A-Aj, A-Aj, -A+Aj, A+Aj, A+Aj, A+Aj, A-Aj, -A+Aj, A-Aj, A+Aj, A+Aj, -A+Aj, A+Aj, -A+Aj, -A-Aj, -A-Aj, -A-Aj, -A+Aj, -A+Aj, -A+Aj, A-Aj, -A-Aj, A+Aj, -A-Aj, A+Aj, A-Aj, -A-Aj, -A-Aj, -A+Aj, A+Aj, A+Aj, -A+Aj, -A-Aj, A-Aj, A-Aj, A-Aj, - A+Aj, -A-Aj, -A-Aj, -A+Aj, -A-Aj, -A-Aj, A+Aj, A-Aj, A+Aj, A+Aj, A+Aj, -A+Aj, A-Aj, -A-Aj, -A+Aj, A-Aj, -A-Aj, A-Aj, -A+Aj, A-Aj, -A-Aj, -A-Aj, A+Aj, -A+Aj, -A-Aj, -A+Aj, -A+Aj, -A-Aj, A+Aj, -A+Aj, -A+Aj, -A-Aj, - A-Aj, A-Aj, A+Aj, A-Aj, -A+Aj, A+Aj, A-Aj, A-Aj, A+Aj, A+Aj, A-Aj, -A-Aj, A+Aj, A-Aj, -A+Aj, -A+Aj, -A-Aj, -A+Aj, A+Aj, A-Aj, -A-Aj, -A+Aj, -A-Aj |

(continued)

| Index | Pilot sequence |
|---|---|
| 5 | A-Aj, A+Aj, -A-Aj, -A+Aj, -A+Aj, -A+Aj, -A+Aj, -A-Aj, -A+Aj, -A-Aj, A-Aj, A-Aj, -A+Aj, -A+Aj, A-Aj, -A-Aj, -A-Aj, -A-Aj, -A+Aj, A-Aj, -A+Aj, -A-Aj, -A-Aj, A-Aj, -A-Aj, A-Aj, A+Aj, A+Aj, A+Aj, A-Aj, A-Aj, A-Aj, - A+Aj, A+Aj, -A-Aj, A+Aj, -A-Aj, -A+Aj, A+Aj, A+Aj, A-Aj, -A-Aj, -A-Aj, A-Aj, A+Aj, -A+Aj, -A+Aj, -A+Aj, A-Aj, A+Aj, A+Aj, A-Aj, A+Aj, A+Aj, -A-Aj, -A+Aj, -A-Aj, -A-Aj, -A-Aj, A-Aj, -A+Aj, A+Aj, A-Aj, -A+Aj, A+Aj, -A+Aj, A-Aj, -A+Aj, A+Aj, A+Aj, -A-Aj, A-Aj, A+Aj, A-Aj, A-Aj, A+Aj, -A-Aj, A-Aj, A-Aj, A+Aj, A+Aj, -A+Aj, -A-Aj, -A+Aj, A-Aj, -A-Aj, -A+Aj, -A+Aj, -A-Aj, -A-Aj, -A+Aj, A+Aj, -A-Aj, -A+Aj, A-Aj, A-Aj, A+Aj, A-Aj, -A-Aj, -A+Aj, A+Aj, A-Aj, A+Aj, -A+Aj |
| 6 | A+Aj, -A-Aj, -A+Aj, -A+Aj, -A+Aj, -A+Aj, -A-Aj, -A+Aj, -A-Aj, A-Aj, A-Aj, -A+Aj, -A+Aj, A-Aj, -A-Aj, -A-Aj, -A-Aj, -A+Aj, A-Aj, -A+Aj, -A-Aj, -A-Aj, A-Aj, -A-Aj, A-Aj, A+Aj, A+Aj, A+Aj, A-Aj, A-Aj, A-Aj, -A+Aj, A+Aj, -A-Aj, A+Aj, -A-Aj, -A+Aj, A+Aj, A+Aj, A-Aj, -A-Aj, -A-Aj, A-Aj, A+Aj, -A+Aj, -A+Aj, -A+Aj, A-Aj, A+Aj, A+Aj, A-Aj, A+Aj, A+Aj, -A-Aj, -A+Aj, -A-Aj, -A-Aj, -A-Aj, A-Aj, -A+Aj, A+Aj, A-Aj, -A+Aj, A+Aj, - A+Aj, A-Aj, -A+Aj, A+Aj, A+Aj, -A-Aj, A-Aj, A+Aj, A-Aj, A-Aj, A+Aj, -A-Aj, A-Aj, A-Aj, A+Aj, A+Aj, -A+Aj, -A-Aj, -A+Aj, A-Aj, -A-Aj, -A+Aj, -A+Aj, -A-Aj, -A-Aj, -A+Aj, A+Aj, -A-Aj, -A+Aj, A-Aj, A-Aj, A+Aj, A-Aj, - A-Aj, -A+Aj, A+Aj, A-Aj, A+Aj, -A+Aj, A-Aj |

Third, there may be the following several possible training sequences, which can also ensure a relatively good cross-correlation between training sequences in the two polarization directions.

(1) It is assumed that $N_{TS} = 6$, and the training sequence may be any item in Table 31.

**Table 31**

| Index | Polarization | Training sequence |
|---|---|---|
| 1 | Polarization 1 | -A-Aj, -A+Aj, A+Aj, -A-Aj, A-Aj, A+Aj |
|   | Polarization 2 | -A+Aj, -A+Aj, -A-Aj, A+Aj, A-Aj, A-Aj |
| 2 | Polarization 1 | -A+Aj, A+Aj, A-Aj, -A+Aj, -A-Aj, A-Aj |
|   | Polarization 2 | -A-Aj, -A-Aj, A-Aj. -A+Aj, A+Aj, A+Aj |
| 3 | Polarization 1 | -A+Aj, A+Aj, A+Aj, -A-Aj, -A-Aj, A-Aj |
|   | Polarization 2 | -A+Aj, -A-Aj, A-Aj, -A+Aj, A+Aj, A-Aj |
| 4 | Polarization 1 | -A+Aj, A+Aj, A-Aj, -A+Aj, -A-Aj, A-Aj |
|   | Polarization 2 | -A+Aj, -A-Aj, -A-Aj, A+Aj, A+Aj, A-Aj |
| 5 | Polarization 1 | A-Aj, A+Aj, -A+Aj, A-Aj, -A-Aj, -A+Aj |
|   | Polarization 2 | -A-Aj, -A-Aj, -A+Aj, A-Aj, A+Aj, A+Aj |
| 6 | Polarization 1 | A-Aj, A-Aj, -A-Aj, A+Aj, -A+Aj, -A+Aj |
|   | Polarization 2 | -A-Aj, A-Aj, A+Aj, -A-Aj, -A+Aj, A+Aj |
| 7 | Polarization 1 | A-Aj, A+Aj, A+Aj, -A-Aj, -A-Aj, -A+Aj |
|   | Polarization 2 | A-Aj, -A-Aj, -A+Aj, A-Aj, A+Aj, -A+Aj |
| 8 | Polarization 1 | A-Aj, A+Aj, -A+Aj, A-Aj, -A-Aj, -A+Aj |
|   | Polarization 2 | A-Aj, -A-Aj, -A-Aj, A+Aj, A+Aj, -A+Aj |
| 9 | Polarization 1 | A-Aj, A-Aj, A+Aj, -A-Aj, -A+Aj, -A+Aj |
|   | Polarization 2 | A+Aj, A-Aj, -A-Aj, A+Aj, -A+Aj, -A-Aj |
| 10 | Polarization 1 | A+Aj, A-Aj, A-Aj, -A+Aj, -A+Aj, -A-Aj |
|   | Polarization 2 | -A-Aj, A-Aj, A+Aj, -A-Aj, -A+Aj, A+Aj |
| 11 | Polarization 1 | A+Aj, A-Aj, -A-Aj, A+Aj, -A+Aj, -A-Aj |
|   | Polarization 2 | -A-Aj, A-Aj, A-Aj, -A+Aj, -A+Aj, A+Aj |

(continued)

| Index | Polarization | Training sequence |
|---|---|---|
| 12 | Polarization 1 | A+Aj, -A+Aj, -A+Aj, A-Aj, A-Aj, -A-Aj |
| | Polarization 2 | -A-Aj, -A+Aj, A+Aj, -A-Aj, A-Aj, A+Aj |
| 13 | Polarization 1 | A+Aj, -A+Aj, -A-Aj, A+Aj, A-Aj, -A-Aj |
| | Polarization 2 | -A-Aj, -A+Aj, -A+Aj, A-Aj, A-Aj, A+Aj |
| 14 | Polarization 1 | A+Aj, A+Aj, A-Aj, -A+Aj, -A-Aj, -A-Aj |
| | Polarization 2 | -A+Aj, -A-Aj, A-Aj, -A+Aj, A+Aj, A-Aj |
| 15 | Polarization 1 | A+Aj, -A+Aj, -A-Aj, A+Aj, A-Aj, -A-Aj |
| | Polarization 2 | -A+Aj, -A+Aj, A+Aj, -A-Aj, A-Aj, A-Aj |
| 16 | Polarization 1 | A+Aj, A+Aj, -A+Aj, A-Aj, -A-Aj, -A-Aj |
| | Polarization 2 | A-Aj, -A-Aj, -A+Aj, A-Aj, A+Aj, -A+Aj |

(2) When $N_{TS} = 8$, the training sequence is one item in Table 32.

**Table 32**

| Index | Polarization | Training sequence |
|---|---|---|
| 1 | Polarization 1 | A+Aj, A-Aj, A-Aj, -A+Aj, A+Aj, -A-Aj, -A+Aj, -A-Aj |
| | Polarization 2 | A-Aj, -A+Aj, A-Aj, A+Aj, A+Aj, -A-Aj, -A-Aj, -A+Aj |
| 2 | Polarization 1 | A+Aj, A-Aj, A-Aj, -A+Aj, A+Aj, -A-Aj, -A+Aj, -A-Aj |
| | Polarization 2 | A+Aj, -A-Aj, A+Aj, -A+Aj, -A+Aj, A-Aj, A-Aj, -A-Aj |
| 3 | Polarization 1 | A+Aj, A-Aj, A-Aj, -A+Aj, A+Aj, -A-Aj, -A+Aj, -A-Aj |
| | Polarization 2 | -A-Aj, A+Aj, -A-Aj, A-Aj, A-Aj, -A+Aj, -A+Aj, A+Aj |
| 4 | Polarization 1 | A+Aj, A-Aj, A-Aj, -A+Aj, A+Aj, -A-Aj, -A+Aj, -A-Aj |
| | Polarization 2 | -A+Aj, A-Aj, -A+Aj, -A-Aj, -A-Aj, A+Aj, A+Aj, A-Aj |
| 5 | Polarization 1 | A+Aj, A-Aj, A+Aj, -A-Aj, A-Aj, -A+Aj, -A+Aj, -A-Aj |
| | Polarization 2 | A-Aj, A+Aj, A+Aj, -A-Aj, -A-Aj, -A+Aj, A-Aj, -A+Aj |
| 6 | Polarization 1 | A+Aj, A-Aj, A+Aj, -A-Aj, A-Aj, -A+Aj, -A+Aj, -A-Aj |
| | Polarization 2 | A+Aj, -A+Aj, -A+Aj, A-Aj, A-Aj, -A-Aj, A+Aj, -A-Aj |
| 7 | Polarization 1 | A+Aj, A-Aj, A+Aj, -A-Aj, A-Aj, -A+Aj, -A+Aj, -A-Aj |
| | Polarization 2 | -A-Aj, A-Aj, A-Aj, -A+Aj, -A+Aj, A+Aj, -A-Aj, A+Aj |
| 8 | Polarization 1 | A+Aj, A-Aj, A+Aj, -A-Aj, A-Aj, -A+Aj, -A+Aj, -A-Aj |
| | Polarization 2 | -A+Aj, -A-Aj, -A-Aj, A+Aj, A+Aj, A-Aj, -A+Aj, A-Aj |
| 9 | Polarization 1 | A-Aj, A+Aj, A-Aj, -A+Aj, A+Aj, -A-Aj, -A-Aj, -A+Aj |
| | Polarization 2 | A+Aj, A-Aj, A-Aj, -A+Aj, -A+Aj, -A-Aj, A+Aj, -A-Aj |
| 10 | Polarization 1 | A-Aj, A+Aj, A-Aj, -A+Aj, A+Aj, -A-Aj, -A-Aj, -A+Aj |
| | Polarization 2 | A-Aj, -A-Aj, -A-Aj, A+Aj, A+Aj, -A+Aj, A-Aj, -A+Aj |
| 11 | Polarization 1 | A-Aj, A+Aj, A-Aj, -A+Aj, A+Aj, -A-Aj, -A-Aj, -A+Aj |
| | Polarization 2 | -A+Aj, A+Aj, A+Aj, -A-Aj, -A-Aj, A-Aj, -A+Aj, A-Aj |
| 12 | Polarization 1 | A-Aj, A+Aj, A-Aj, -A+Aj, A+Aj, -A-Aj, -A-Aj, -A+Aj |
| | Polarization 2 | -A-Aj, -A+Aj, -A+Aj, A-Aj, A-Aj, A+Aj, -A-Aj, A+Aj |

(continued)

| Index | Polarization | Training sequence |
|---|---|---|
| 13 | Polarization 1 | A-Aj, A+Aj, A+Aj, -A-Aj, A-Aj, -A+Aj, -A-Aj, -A+Aj |
| | Polarization 2 | A+Aj, -A-Aj, A+Aj, A-Aj, A-Aj, -A+Aj, -A+Aj, -A-Aj |
| 14 | Polarization 1 | A-Aj, A+Aj, A+Aj, -A-Aj, A-Aj, -A+Aj, -A-Aj, -A+Aj |
| | Polarization 2 | A-Aj, -A+Aj, A-Aj, -A-Aj, -A-Aj, A+Aj, A+Aj, A+Aj |
| 15 | Polarization 1 | A-Aj, A+Aj, A+Aj, -A-Aj, A-Aj, -A+Aj, -A-Aj, -A+Aj |
| | Polarization 2 | -A+Aj, A-Aj, -A+Aj, A+Aj, A+Aj, -A-Aj, -A-Aj, A-Aj |
| 16 | Polarization 1 | A-Aj, A+Aj, A+Aj, -A-Aj, A-Aj, -A+Aj, -A-Aj, -A+Aj |
| | Polarization 2 | -A-Aj, A+Aj, -A-Aj, -A+Aj, -A+Aj, A-Aj, A-Aj, A+Aj |
| 17 | Polarization 1 | A+Aj, -A-Aj, A+Aj, A-Aj, A-Aj, -A+Aj, -A+Aj, -A-Aj |
| | Polarization 2 | A+Aj, -A+Aj, -A+Aj, A-Aj, A+Aj, -A-Aj, A-Aj, A-Aj |
| 18 | Polarization 1 | A+Aj, -A-Aj, A+Aj, A-Aj, A-Aj, -A+Aj, -A+Aj, -A-Aj |
| | Polarization 2 | -A-Aj, A-Aj, A-Aj, -A+Aj, -A-Aj, A+Aj, -A+Aj, A+Aj |
| 19 | Polarization 1 | A+Aj, -A-Aj, A+Aj, A-Aj, A-Aj, -A+Aj, -A+Aj, -A-Aj |
| | Polarization 2 | -A+Aj, -A-Aj, -A-Aj, A+Aj, -A+Aj, A-Aj, A+Aj, A-Aj |
| 20 | Polarization 1 | A-Aj, -A+Aj, A-Aj, A+Aj, A+Aj, -A-Aj, -A-Aj, -A+Aj |
| | Polarization 2 | A-Aj, -A-Aj, -A-Aj, A+Aj, A-Aj, -A+Aj, A+Aj, -A+Aj |
| 21 | Polarization 1 | A-Aj, -A+Aj, A-Aj, A+Aj, A+Aj, -A-Aj, -A-Aj, -A+Aj |
| | Polarization 2 | -A+Aj, A+Aj, A+Aj, -A-Aj, -A+Aj, A-Aj, -A-Aj, A-Aj |
| 22 | Polarization 1 | A-Aj, -A+Aj, A-Aj, A+Aj, A+Aj, -A-Aj, -A-Aj, -A+Aj |
| | Polarization 2 | -A-Aj, -A+Aj, -A+Aj, A-Aj, -A-Aj, A+Aj, A-Aj, A+Aj |
| 23 | Polarization 1 | A+Aj, A-Aj, A-Aj, -A+Aj, -A+Aj, -A-Aj, A+Aj, -A-Aj |
| | Polarization 2 | A+Aj, -A+Aj, A+Aj, -A-Aj, -A+Aj, A-Aj, A-Aj, A-Aj |
| 24 | Polarization 1 | A+Aj, A-Aj, A-Aj, -A+Aj, -A+Aj, -A-Aj, A+Aj, -A-Aj |
| | Polarization 2 | -A-Aj, A-Aj, -A-Aj, A+Aj, A-Aj, -A+Aj, -A+Aj, A+Aj |
| 25 | Polarization 1 | A+Aj, A-Aj, A-Aj, -A+Aj, -A+Aj, -A-Aj, A+Aj, -A-Aj |
| | Polarization 2 | -A+Aj, -A-Aj, -A+Aj, A-Aj, -A-Aj, A+Aj, A+Aj, A-Aj |
| 26 | Polarization 1 | A-Aj, A+Aj, A+Aj, -A-Aj, -A-Aj, -A+Aj, A-Aj, -A+Aj |
| | Polarization 2 | A-Aj, -A-Aj, A-Aj, -A+Aj, -A-Aj, A+Aj, A+Aj, A+Aj |
| 27 | Polarization 1 | A-Aj, A+Aj, A+Aj, -A-Aj, -A-Aj, -A+Aj, A-Aj, -A+Aj |
| | Polarization 2 | -A+Aj, A+Aj, -A+Aj, A-Aj, A+Aj, -A-Aj, -A-Aj, A-Aj |
| 28 | Polarization 1 | A-Aj, A+Aj, A+Aj, -A-Aj, -A-Aj, -A+Aj, A-Aj, -A+Aj |
| | Polarization 2 | -A-Aj, -A+Aj, -A-Aj, A+Aj, -A+Aj, A-Aj, A-Aj, A+Aj |
| 29 | Polarization 1 | A+Aj, -A+Aj, -A+Aj, A-Aj, A+Aj, -A-Aj, A-Aj, -A-Aj |
| | Polarization 2 | A-Aj, -A+Aj, A-Aj, -A-Aj, -A-Aj, A+Aj, A+Aj, -A+Aj |
| 30 | Polarization 1 | A+Aj, -A+Aj, -A+Aj, A-Aj, A+Aj, -A-Aj, A-Aj, -A-Aj |
| | Polarization 2 | -A+Aj, A-Aj, -A+Aj, A+Aj, A+Aj, -A-Aj, -A-Aj, A-Aj |
| 31 | Polarization 1 | A+Aj, -A+Aj, -A+Aj, A-Aj, A+Aj, -A-Aj, A-Aj, -A-Aj |
| | Polarization 2 | -A-Aj, A+Aj, -A-Aj, -A+Aj, -A+Aj, A-Aj, A-Aj, A+Aj |

(continued)

| Index | Polarization | Training sequence |
|---|---|---|
| 32 | Polarization 1 | A+Aj, -A+Aj, -A+Aj, A-Aj, A-Aj, -A-Aj, A+Aj, -A-Aj |
|  | Polarization 2 | A-Aj, -A-Aj, A-Aj, -A+Aj, -A-Aj, A+Aj, A+Aj, -A+Aj |
| 33 | Polarization 1 | A+Aj, -A+Aj, -A+Aj, A-Aj, A-Aj, -A-Aj, A+Aj, -A-Aj |
|  | Polarization 2 | -A+Aj, A+Aj, -A+Aj, A-Aj, A+Aj, -A-Aj, -A-Aj, A-Aj |
| 34 | Polarization 1 | A+Aj, -A+Aj, -A+Aj, A-Aj, A-Aj, -A-Aj, A+Aj, -A-Aj |
|  | Polarization 2 | -A-Aj, -A+Aj, -A-Aj, A+Aj, -A+Aj, A-Aj, A-Aj, A+Aj |
| 35 | Polarization 1 | A-Aj, -A-Aj, -A-Aj, A+Aj, A+Aj, -A+Aj, A-Aj, -A+Aj |
|  | Polarization 2 | A+Aj, -A+Aj, A+Aj, -A-Aj, -A+Aj, A-Aj, A-Aj, -A-Aj |
| 36 | Polarization 1 | A-Aj, -A-Aj, -A-Aj, A+Aj, A+Aj, -A+Aj, A-Aj, -A+Aj |
|  | Polarization 2 | -A-Aj, A-Aj, -A-Aj, A+Aj, A-Aj, -A+Aj, -A+Aj, A+Aj |
| 37 | Polarization 1 | A-Aj, -A-Aj, -A-Aj, A+Aj, A+Aj, -A+Aj, A-Aj, -A+Aj |
|  | Polarization 2 | -A+Aj, -A-Aj, -A+Aj, A-Aj, -A-Aj, A+Aj, A+Aj, A-Aj |
| 38 | Polarization 1 | A-Aj, -A-Aj, -A-Aj, A+Aj, A-Aj, -A+Aj, A+Aj, -A+Aj |
|  | Polarization 2 | A+Aj, -A-Aj, A+Aj, -A+Aj, -A+Aj, A-Aj, A-Aj, -A-Aj |
| 39 | Polarization 1 | A-Aj, -A-Aj, -A-Aj, A+Aj, A-Aj, -A+Aj, A+Aj, -A+Aj |
|  | Polarization 2 | -A-Aj, A+Aj, -A-Aj, A-Aj, A-Aj, -A+Aj, -A+Aj, A+Aj |
| 40 | Polarization 1 | A-Aj, -A-Aj, -A-Aj, A+Aj, A-Aj, -A+Aj, A+Aj, -A+Aj |
|  | Polarization 2 | -A+Aj, A-Aj, -A+Aj, -A-Aj, -A-Aj, A+Aj, A+Aj, A-Aj |
| 41 | Polarization 1 | A+Aj, -A+Aj, A+Aj, -A-Aj, -A+Aj, A-Aj, A-Aj, -A-Aj |
|  | Polarization 2 | -A+Aj, A+Aj, A+Aj, -A-Aj, -A-Aj, A-Aj, -A+Aj, A-Aj |
| 42 | Polarization 1 | A+Aj, -A+Aj, A+Aj, -A-Aj, -A+Aj, A-Aj, A-Aj, -A-Aj |
|  | Polarization 2 | -A-Aj, -A+Aj, -A+Aj, A-Aj, A-Aj, A+Aj, -A-Aj, A+Aj |
| 43 | Polarization 1 | A+Aj, -A-Aj, A+Aj, -A+Aj, -A+Aj, A-Aj, A-Aj, -A-Aj |
|  | Polarization 2 | -A+Aj, A+Aj, A+Aj, -A-Aj, -A+Aj, A-Aj, -A-Aj, A-Aj |
| 44 | Polarization 1 | A+Aj, -A-Aj, A+Aj, -A+Aj, -A+Aj, A-Aj, A-Aj, -A-Aj |
|  | Polarization 2 | -A-Aj, -A+Aj, -A+Aj, A-Aj, -A-Aj, A+Aj, A-Aj, A+Aj |
| 45 | Polarization 1 | A-Aj, -A+Aj, A-Aj, -A-Aj, -A-Aj, A+Aj, A+Aj, -A+Aj |
|  | Polarization 2 | -A-Aj, A-Aj, A-Aj, -A+Aj, -A-Aj, A+Aj, -A+Aj, A+Aj |
| 46 | Polarization 1 | A-Aj, -A+Aj, A-Aj, -A-Aj, -A-Aj, A+Aj, A+Aj, -A+Aj |
|  | Polarization 2 | -A+Aj, -A-Aj, -A-Aj, A+Aj, -A+Aj, A-Aj, A+Aj, A-Aj |
| 47 | Polarization 1 | A-Aj, -A-Aj, A-Aj, -A+Aj, -A-Aj, A+Aj, A+Aj, -A+Aj |
|  | Polarization 2 | -A-Aj, A-Aj, A-Aj, -A+Aj, -A+Aj, A+Aj, -A-Aj, A+Aj |
| 48 | Polarization 1 | A-Aj, -A-Aj, A-Aj, -A+Aj, -A-Aj, A+Aj, A+Aj, -A+Aj |
|  | Polarization 2 | -A+Aj, -A-Aj, -A-Aj, A+Aj, A+Aj, A-Aj, -A+Aj, A-Aj |
| 49 | Polarization 1 | -A+Aj, A+Aj, -A+Aj, A-Aj, A+Aj, -A-Aj, -A-Aj, A-Aj |
|  | Polarization 2 | -A-Aj, A-Aj, A-Aj, -A+Aj, -A+Aj, A+Aj, -A-Aj, A+Aj |
| 50 | Polarization 1 | -A+Aj, A+Aj, -A+Aj, A-Aj, A+Aj, -A-Aj, -A-Aj, A-Aj |
|  | Polarization 2 | -A+Aj, -A-Aj, -A-Aj, A+Aj, A+Aj, A-Aj, -A+Aj, A-Aj |

(continued)

| Index | Polarization | Training sequence |
|---|---|---|
| 51 | Polarization 1 | -A+Aj, A-Aj, -A+Aj, A+Aj, A+Aj, -A-Aj, -A-Aj, A-Aj |
| | Polarization 2 | -A-Aj, A-Aj, A-Aj, -A+Aj, -A-Aj, A+Aj, -A+Aj, A+Aj |
| 52 | Polarization 1 | -A+Aj, A-Aj, -A+Aj, A+Aj, A+Aj, -A-Aj, -A-Aj, A-Aj |
| | Polarization 2 | -A+Aj, -A-Aj, -A-Aj, A+Aj, -A+Aj, A-Aj, A+Aj, A-Aj |
| 53 | Polarization 1 | -A-Aj, A+Aj, -A-Aj, A-Aj, A-Aj, -A+Aj, -A+Aj, A+Aj |
| | Polarization 2 | -A+Aj, A+Aj, A+Aj, -A-Aj, -A+Aj, A-Aj, -A-Aj, A-Aj |
| 54 | Polarization 1 | -A-Aj, A+Aj, -A-Aj, A-Aj, A-Aj, -A+Aj, -A+Aj, A+Aj |
| | Polarization 2 | -A-Aj, -A+Aj, -A+Aj, A-Aj, -A-Aj, A+Aj, A-Aj, A+Aj |
| 55 | Polarization 1 | -A-Aj, A-Aj, -A-Aj, A+Aj, A-Aj, -A+Aj, -A+Aj, A+Aj |
| | Polarization 2 | -A+Aj, A+Aj, A+Aj, -A-Aj, -A-Aj, A-Aj, -A+Aj, A-Aj |
| 56 | Polarization 1 | -A-Aj, A-Aj, -A-Aj, A+Aj, A-Aj, -A+Aj, -A+Aj, A+Aj |
| | Polarization 2 | -A-Aj, -A+Aj, -A+Aj, A-Aj, A-Aj, A+Aj, -A-Aj, A+Aj |
| 57 | Polarization 1 | -A+Aj, A+Aj, A+Aj, -A-Aj, -A+Aj, A-Aj, -A-Aj, A-Aj |
| | Polarization 2 | -A+Aj, A-Aj, -A+Aj, -A-Aj, -A-Aj, A+Aj, A+Aj, A-Aj |
| 58 | Polarization 1 | -A+Aj, A+Aj, A+Aj, -A-Aj, -A-Aj, A-Aj, -A+Aj, A-Aj |
| | Polarization 2 | -A+Aj, -A-Aj, -A+Aj, A-Aj, -A-Aj, A+Aj, A+Aj, A-Aj |
| 59 | Polarization 1 | -A-Aj, A-Aj, A-Aj, -A+Aj, -A+Aj, A+Aj, -A-Aj, A+Aj |
| | Polarization 2 | -A-Aj, -A+Aj, -A-Aj, A+Aj, -A+Aj, A-Aj, A-Aj, A+Aj |
| 60 | Polarization 1 | -A-Aj, A-Aj, A-Aj, -A+Aj, -A-Aj, A+Aj, -A+Aj, A+Aj |
| | Polarization 2 | -A-Aj, A+Aj, -A-Aj, -A+Aj, -A+Aj, A-Aj, A-Aj, A+Aj |
| 61 | Polarization 1 | -A+Aj, -A-Aj, -A-Aj, A+Aj, A+Aj, A-Aj, -A+Aj, A-Aj |
| | Polarization 2 | -A-Aj, -A+Aj, -A-Aj, A+Aj, -A+Aj, A-Aj, A-Aj, A+Aj |
| 62 | Polarization 1 | -A-Aj, -A+Aj, -A+Aj, A-Aj, A-Aj, A+Aj, -A-Aj, A+Aj |
| | Polarization 2 | -A+Aj, -A-Aj, -A+Aj, A-Aj, -A-Aj, A+Aj, A+Aj, A-Aj |
| 63 | Polarization 1 | -A+Aj, A-Aj, -A+Aj, -A-Aj, -A-Aj, A+Aj, A+Aj, A-Aj |
| | Polarization 2 | -A-Aj, -A+Aj, -A+Aj, A-Aj, -A-Aj, A+Aj, A-Aj, A+Aj |
| 64 | Polarization 1 | -A-Aj, A+Aj, -A-Aj, -A+Aj, -A+Aj, A-Aj, A-Aj, A+Aj |
| | Polarization 2 | -A+Aj, -A-Aj, -A-Aj, A+Aj, -A+Aj, A-Aj, A+Aj, A-Aj |

(3) When $N_{TS}$ = 10, the training sequence is one item in the following Table 33.

**Table 33**

| Index | Polarization | Training sequence |
|---|---|---|
| 1 | Polarization 1 | A+Aj, -A-Aj, A+Aj, A+Aj, A-Aj, A-Aj, -A+Aj, -A+Aj, -A-Aj, -A-Aj |
| | Polarization 2 | A-Aj, A-Aj, A+Aj, -A-Aj, -A+Aj, -A+Aj, A-Aj, -A+Aj, A+Aj, -A-Aj |
| 2 | Polarization 1 | A+Aj, -A-Aj, A+Aj, A+Aj, A-Aj, A-Aj, -A+Aj, -A+Aj, -A-Aj, -A-Aj |
| | Polarization 2 | -A+Aj, -A+Aj, -A-Aj, A+Aj, A-Aj, A-Aj, -A+Aj, A-Aj, -A-Aj, A+Aj |
| 3 | Polarization 1 | A-Aj, -A+Aj, A-Aj, A-Aj, A+Aj, A+Aj, -A-Aj, -A-Aj, -A+Aj, -A+Aj |
| | Polarization 2 | A+Aj, A+Aj, A-Aj, -A+Aj, -A-Aj, -A-Aj, A+Aj, -A-Aj, A-Aj, -A+Aj |

171

(continued)

| Index | Polarization | Training sequence |
|---|---|---|
| 4 | Polarization 1 | A-Aj, -A+Aj, A-Aj, A-Aj, A+Aj, A+Aj, -A-Aj, -A-Aj, -A+Aj, -A+Aj |
| | Polarization 2 | -A-Aj, -A-Aj, -A+Aj, A-Aj, A+Aj, A+Aj, -A-Aj, A+Aj, -A+Aj, A-Aj |
| 5 | Polarization 1 | A-Aj, -A+Aj, A+Aj, -A-Aj, A+Aj, A+Aj, A-Aj, -A+Aj, -A-Aj, -A-Aj |
| | Polarization 2 | A-Aj, A-Aj, A+Aj, A+Aj, -A-Aj, -A-Aj, -A+Aj, -A+Aj, A-Aj, -A+Aj |
| 6 | Polarization 1 | A-Aj, -A+Aj, A+Aj, -A-Aj, A+Aj, A+Aj, A-Aj, -A+Aj, -A-Aj, -A-Aj |
| | Polarization 2 | -A+Aj, -A+Aj, -A-Aj, -A-Aj, A+Aj, A+Aj, A-Aj, A-Aj, -A+Aj, A-Aj |
| 7 | Polarization 1 | A+Aj, -A-Aj, A-Aj, -A+Aj, A-Aj, A-Aj, A+Aj, -A-Aj, -A+Aj, -A+Aj |
| | Polarization 2 | A+Aj, A+Aj, A-Aj, A-Aj, -A+Aj, -A+Aj, -A-Aj, -A-Aj, A+Aj, -A-Aj |
| 8 | Polarization 1 | A+Aj, -A-Aj, A-Aj, -A+Aj, A-Aj, A-Aj, A+Aj, -A-Aj, -A+Aj, -A+Aj |
| | Polarization 2 | -A-Aj, -A-Aj, -A+Aj, -A+Aj, A-Aj, A-Aj, A+Aj, A+Aj, -A-Aj, A+Aj |
| 9 | Polarization 1 | -A+Aj, A-Aj, A+Aj, -A-Aj, A+Aj, A+Aj, -A+Aj, A-Aj, -A-Aj, -A-Aj |
| | Polarization 2 | A-Aj, A-Aj, -A-Aj, -A-Aj, A+Aj, A+Aj, -A+Aj, -A+Aj, A-Aj, -A+Aj |
| 10 | Polarization 1 | -A+Aj, A-Aj, A+Aj, -A-Aj, A+Aj, A+Aj, -A+Aj, A-Aj, -A-Aj, -A-Aj |
| | Polarization 2 | -A+Aj, -A+Aj, A+Aj, A+Aj, -A-Aj, -A-Aj, A-Aj, A-Aj, -A+Aj, A-Aj |
| 11 | Polarization 1 | -A-Aj, A+Aj, A-Aj, -A+Aj, A-Aj, A-Aj, -A-Aj, A+Aj, -A+Aj, -A+Aj |
| | Polarization 2 | A+Aj, A+Aj, -A+Aj, -A+Aj, A-Aj, A-Aj, -A-Aj, -A-Aj, A+Aj, -A-Aj |
| 12 | Polarization 1 | -A-Aj, A+Aj, A-Aj, -A+Aj, A-Aj, A-Aj, -A-Aj, A+Aj, -A+Aj, -A+Aj |
| | Polarization 2 | -A-Aj, -A-Aj, A-Aj, A-Aj, -A+Aj, -A+Aj, A+Aj, A+Aj, -A-Aj, A+Aj |
| 13 | Polarization 1 | A+Aj, -A-Aj, A+Aj, A+Aj, -A+Aj, -A+Aj, A-Aj, A-Aj, -A-Aj, -A-Aj |
| | Polarization 2 | -A+Aj, -A+Aj, A+Aj, -A-Aj, A-Aj, A-Aj, -A+Aj, A-Aj, A+Aj, -A-Aj |
| 14 | Polarization 1 | A+Aj, -A-Aj, A+Aj, A+Aj, -A+Aj, -A+Aj, A-Aj, A-Aj, -A-Aj, -A-Aj |
| | Polarization 2 | A-Aj, A-Aj, -A-Aj, A+Aj, -A+Aj, -A+Aj, A-Aj, -A+Aj, -A-Aj, A+Aj |
| 15 | Polarization 1 | A-Aj, -A+Aj, A-Aj, A-Aj, -A-Aj, -A-Aj, A+Aj, A+Aj, -A+Aj, -A+Aj |
| | Polarization 2 | -A-Aj, -A-Aj, A-Aj, -A+Aj, A+Aj, A+Aj, -A-Aj, A+Aj, A-Aj, -A+Aj |
| 16 | Polarization 1 | A-Aj, -A+Aj, A-Aj, A-Aj, -A-Aj, -A-Aj, A+Aj, A+Aj, -A+Aj, -A+Aj |
| | Polarization 2 | A+Aj, A+Aj, -A+Aj, A-Aj, -A-Aj, -A-Aj, A+Aj, -A-Aj, -A+Aj, A-Aj |
| 17 | Polarization 1 | A+Aj, A+Aj, A-Aj, A-Aj, -A+Aj, -A+Aj, -A-Aj, -A-Aj, A+Aj, -A-Aj |
| | Polarization 2 | -A-Aj, A+Aj, -A+Aj, A-Aj, -A+Aj, -A+Aj, -A-Aj, A+Aj, A-Aj, A-Aj |
| 18 | Polarization 1 | A-Aj, A-Aj, A+Aj, A+Aj, -A-Aj, -A-Aj, -A+Aj, -A+Aj, A-Aj, -A+Aj |
| | Polarization 2 | -A+Aj, A-Aj, -A-Aj, A+Aj, -A-Aj, -A-Aj, -A+Aj, A-Aj, A+Aj, A+Aj |
| 19 | Polarization 1 | A+Aj, A+Aj, -A+Aj, -A+Aj, A-Aj, A-Aj, -A-Aj, -A-Aj, A+Aj, -A-Aj |
| | Polarization 2 | A+Aj, -A-Aj, -A+Aj, A-Aj, -A+Aj, -A+Aj, A+Aj, -A-Aj, A-Aj, A-Aj |
| 20 | Polarization 1 | A-Aj, A-Aj, -A-Aj, -A-Aj, A+Aj, A+Aj, -A+Aj, -A+Aj, A-Aj, -A+Aj |
| | Polarization 2 | A-Aj, -A+Aj, -A-Aj, A+Aj, -A-Aj, -A-Aj, A-Aj, -A+Aj, A+Aj, A+Aj |
| 21 | Polarization 1 | A-Aj, A-Aj, A+Aj, -A-Aj, -A+Aj, -A+Aj, A-Aj, -A+Aj, A+Aj, -A-Aj |
| | Polarization 2 | -A-Aj, A+Aj, -A-Aj, -A-Aj, -A+Aj, -A+Aj, A-Aj, A-Aj, A+Aj, A+Aj |
| 22 | Polarization 1 | A+Aj, A+Aj, A-Aj, -A+Aj, -A-Aj, -A-Aj, A+Aj, -A-Aj, A-Aj, -A+Aj |
| | Polarization 2 | -A+Aj, A-Aj, -A+Aj, -A+Aj, -A-Aj, -A-Aj, A+Aj, A+Aj, A-Aj, A-Aj |

(continued)

| Index | Polarization | Training sequence |
|---|---|---|
| 23 | Polarization 1 | -A+Aj, -A+Aj, A+Aj, -A-Aj, A-Aj, A-Aj, -A+Aj, A-Aj, A+Aj, -A-Aj |
| | Polarization 2 | -A-Aj, A+Aj, -A-Aj, -A-Aj, A-Aj, A-Aj, -A+Aj, -A+Aj, A+Aj, A+Aj |
| 24 | Polarization 1 | -A-Aj, -A-Aj, A-Aj, -A+Aj, A+Aj, A+Aj, -A-Aj, A+Aj, A-Aj, -A+Aj |
| | Polarization 2 | -A+Aj, A-Aj, -A+Aj, -A+Aj, A+Aj, A+Aj, -A-Aj, -A-Aj, A-Aj, A-Aj |
| 25 | Polarization 1 | A+Aj, A+Aj, -A+Aj, A-Aj, -A-Aj, -A-Aj, A+Aj, -A-Aj, -A+Aj, A-Aj |
| | Polarization 2 | -A+Aj, A-Aj, -A+Aj, -A+Aj, A+Aj, A+Aj, -A-Aj, -A-Aj, A-Aj, A-Aj |
| 26 | Polarization 1 | A-Aj, A-Aj, -A-Aj, A+Aj, -A+Aj, -A+Aj, A-Aj, -A+Aj, -A-Aj, A+Aj |
| | Polarization 2 | -A-Aj, A+Aj, -A-Aj, -A-Aj, A-Aj, A-Aj, -A+Aj, -A+Aj, A+Aj, A+Aj |
| 27 | Polarization 1 | -A-Aj, -A-Aj, -A+Aj, A-Aj, A+Aj, A+Aj, -A-Aj, A+Aj, -A+Aj, A-Aj |
| | Polarization 2 | -A+Aj, A-Aj, -A+Aj, -A+Aj, -A-Aj, -A-Aj, A+Aj, A+Aj, A-Aj, A-Aj |
| 28 | Polarization 1 | -A+Aj, -A+Aj, -A-Aj, A+Aj, A-Aj, A-Aj, -A+Aj, A-Aj, -A-Aj, A+Aj |
| | Polarization 2 | -A-Aj, A+Aj, -A-Aj, -A-Aj, -A+Aj, -A+Aj, A-Aj, A-Aj, A+Aj, A+Aj |
| 29 | Polarization 1 | -A+Aj, -A+Aj, A+Aj, A+Aj, -A-Aj, -A-Aj, A-Aj, A-Aj, -A+Aj, A-Aj |
| | Polarization 2 | A-Aj, -A+Aj, -A-Aj, A+Aj, -A-Aj, -A-Aj, A-Aj, -A+Aj, A+Aj, A+Aj |
| 30 | Polarization 1 | -A-Aj, -A-Aj, A-Aj, A-Aj, -A+Aj, -A+Aj, A+Aj, A+Aj, -A-Aj, A+Aj |
| | Polarization 2 | A+Aj, -A-Aj, -A+Aj, A-Aj, -A+Aj, -A+Aj, A+Aj, -A-Aj, A-Aj, A-Aj |
| 31 | Polarization 1 | -A+Aj, -A+Aj, -A-Aj, -A-Aj, A+Aj, A+Aj, A-Aj, A-Aj, -A+Aj, A-Aj |
| | Polarization 2 | -A+Aj, A-Aj, -A-Aj, A+Aj, -A-Aj, -A-Aj, -A+Aj, A-Aj, A+Aj, A+Aj |
| 32 | Polarization 1 | -A-Aj, -A-Aj, -A+Aj, -A+Aj, A-Aj, A-Aj, A+Aj, A+Aj, -A-Aj, A+Aj |
| | Polarization 2 | -A-Aj, A+Aj, -A+Aj, A-Aj, -A+Aj, -A+Aj, -A-Aj, A+Aj, A-Aj, A-Aj |

(4) When $N_{TS}$ = 12, the training sequence is one item in the following Table 34.

**Table 34**

| Index | Polarization | Training sequence |
|---|---|---|
| 1 | Polarization 1 | A+Aj, A-Aj, -A+Aj, A-Aj, A+Aj, -A+Aj, A+Aj, A-Aj, -A-Aj, -A-Aj, -A+Aj, -A-Aj |
| | Polarization 2 | -A+Aj, -A-Aj, -A-Aj, A+Aj, A-Aj, A+Aj, A+Aj, -A+Aj, A-Aj, A-Aj, -A+Aj, -A-Aj |
| 2 | Polarization 1 | A+Aj, A-Aj, -A+Aj, A-Aj, A+Aj, -A+Aj, A+Aj, A-Aj, -A-Aj, -A-Aj, -A+Aj, -A-Aj |
| | Polarization 2 | A+Aj, -A+Aj, -A+Aj, A-Aj, -A-Aj, A-Aj, A-Aj, A+Aj, -A-Aj, -A-Aj, A+Aj, -A+Aj |
| 3 | Polarization 1 | A+Aj, A-Aj, -A+Aj, A-Aj, A+Aj, -A+Aj, A+Aj, A-Aj, -A-Aj, -A-Aj, -A+Aj, -A-Aj |
| | Polarization 2 | -A-Aj, A-Aj, A-Aj, -A+Aj, A+Aj, -A+Aj, -A+Aj, -A-Aj, A+Aj, A+Aj, -A-Aj, A-Aj |
| 4 | Polarization 1 | A+Aj, A-Aj, -A+Aj, A-Aj, A+Aj, -A+Aj, A+Aj, A-Aj, -A-Aj, -A-Aj, -A+Aj, -A-Aj |
| | Polarization 2 | A-Aj, A+Aj, A+Aj, -A-Aj, -A+Aj, -A-Aj, -A-Aj, A-Aj, -A+Aj, -A+Aj, A-Aj, A+Aj |
| 5 | Polarization 1 | A-Aj, A+Aj, -A-Aj, A+Aj, A-Aj, -A-Aj, A-Aj, A+Aj, -A+Aj, -A+Aj, -A-Aj, -A+Aj |
| | Polarization 2 | -A-Aj, -A+Aj, -A+Aj, A-Aj, A+Aj, A-Aj, A-Aj, -A-Aj, A+Aj, A+Aj, -A-Aj, -A+Aj |
| 6 | Polarization 1 | A-Aj, A+Aj, -A-Aj, A+Aj, A-Aj, -A-Aj, A-Aj, A+Aj, -A+Aj, -A+Aj, -A-Aj, -A+Aj |
| | Polarization 2 | A-Aj, -A-Aj, -A-Aj, A+Aj, -A+Aj, A+Aj, A+Aj, A-Aj, -A+Aj, -A+Aj, A-Aj, -A-Aj |
| 7 | Polarization 1 | A-Aj, A+Aj, -A-Aj, A+Aj, A-Aj, -A-Aj, A-Aj, A+Aj, -A+Aj, -A+Aj, -A-Aj, -A+Aj |
| | Polarization 2 | -A+Aj, A+Aj, A+Aj, -A-Aj, A-Aj, -A-Aj, -A-Aj, -A+Aj, A-Aj, A-Aj, -A+Aj, A+Aj |

(continued)

| Index | Polarization | Training sequence |
|---|---|---|
| 8 | Polarization 1 | A-Aj, A+Aj, -A-Aj, A+Aj, A-Aj, -A-Aj, A-Aj, A+Aj, -A+Aj, -A+Aj, -A-Aj, -A+Aj |
| | Polarization 2 | A+Aj, A-Aj, A-Aj, -A+Aj, -A-Aj, -A+Aj, -A+Aj, A+Aj, -A-Aj, -A-Aj, A+Aj, A-Aj |
| 9 | Polarization 1 | -A+Aj, -A-Aj, A+Aj, A+Aj, -A-Aj, A-Aj, A-Aj, A+Aj, A-Aj, -A+Aj, -A+Aj, -A-Aj |
| | Polarization 2 | A-Aj, A+Aj, A-Aj, A-Aj, -A-Aj, -A+Aj, A+Aj, A+Aj, -A-Aj, A+Aj, -A-Aj, -A+Aj |
| 10 | Polarization 1 | -A+Aj, -A-Aj, A+Aj, A+Aj, -A-Aj, A-Aj, A-Aj, A+Aj, A-Aj, -A+Aj, -A+Aj, -A-Aj |
| | Polarization 2 | A+Aj, -A+Aj, A+Aj, A+Aj, A-Aj, -A-Aj, -A+Aj, -A-Aj, A-Aj, -A+Aj, A-Aj, -A-Aj |
| 11 | Polarization 1 | -A+Aj, -A-Aj, A+Aj, A+Aj, -A-Aj, A-Aj, A-Aj, A+Aj, A-Aj, -A+Aj, -A+Aj, -A-Aj |
| | Polarization 2 | -A-Aj, A-Aj, -A-Aj, -A-Aj, -A+Aj, A+Aj, A-Aj, A+Aj, -A+Aj, A-Aj, -A+Aj, A+Aj |
| 12 | Polarization 1 | -A+Aj, -A-Aj, A+Aj, A+Aj, -A-Aj, A-Aj, A-Aj, A+Aj, A-Aj, -A+Aj, -A+Aj, -A-Aj |
| | Polarization 2 | -A+Aj, -A-Aj, -A+Aj, -A+Aj. A+Aj, A-Aj, -A-Aj, A-Aj, A+Aj, -A-Aj, A+Aj, A-Aj |
| 13 | Polarization 1 | -A-Aj, -A+Aj, A-Aj, A-Aj, -A+Aj, A+Aj, A+Aj, A-Aj, A+Aj, -A-Aj, -A-Aj, -A+Aj |
| | Polarization 2 | A+Aj, A-Aj, A+Aj, A+Aj, -A+Aj, -A-Aj, A-Aj, -A-Aj, -A+Aj, A-Aj, -A+Aj, -A-Aj |
| 14 | Polarization 1 | -A-Aj, -A+Aj, A-Aj, A-Aj, -A+Aj, A+Aj, A+Aj, A-Aj, A+Aj, -A-Aj, -A-Aj, -A+Aj |
| | Polarization 2 | A-Aj, -A-Aj, A-Aj, A-Aj, A+Aj, -A+Aj, -A-Aj, -A+Aj, A+Aj, -A-Aj, A+Aj, -A+Aj |
| 15 | Polarization 1 | -A-Aj, -A+Aj, A-Aj, A-Aj, -A+Aj, A+Aj, A+Aj, A-Aj, A+Aj, -A-Aj, -A-Aj, -A+Aj |
| | Polarization 2 | -A+Aj, A+Aj, -A+Aj, -A+Aj, -A-Aj, A-Aj, A+Aj, A-Aj, -A-Aj, A+Aj, -A-Aj, A-Aj |
| 16 | Polarization 1 | -A-Aj, -A+Aj, A-Aj, A-Aj, -A+Aj, A+Aj, A+Aj, A-Aj, A+Aj, -A-Aj, -A-Aj, -A+Aj |
| | Polarization 2 | -A-Aj, -A+Aj, -A-Aj, -A-Aj, A-Aj, A+Aj, -A+Aj, A+Aj, A-Aj, -A+Aj, A-Aj, A+Aj |
| 17 | Polarization 1 | A+Aj, A-Aj, A+Aj, A+Aj, -A+Aj, -A-Aj, A-Aj, -A-Aj, -A+Aj, A-Aj, -A+Aj, -A-Aj |
| | Polarization 2 | A-Aj, -A-Aj, A+Aj, A+Aj, -A-Aj, -A+Aj, -A+Aj, A+Aj, -A+Aj, A-Aj, A-Aj, -A-Aj |
| 18 | Polarization 1 | A+Aj, A-Aj, A+Aj, A+Aj, -A+Aj, -A-Aj, A-Aj, -A-Aj, -A+Aj, A-Aj, -A+Aj, -A-Aj |
| | Polarization 2 | -A+Aj, A+Aj, -A-Aj, -A-Aj, A+Aj, A-Aj, A-Aj, -A-Aj, A-Aj, -A+Aj, -A+Aj, A+Aj |
| 19 | Polarization 1 | A+Aj, A-Aj, A+Aj, A+Aj, -A+Aj, -A-Aj, A-Aj, -A-Aj, -A+Aj, A-Aj, -A+Aj, -A-Aj |
| | Polarization 2 | A+Aj, A-Aj, -A+Aj, -A+Aj, A-Aj, -A-Aj, -A-Aj, -A+Aj, -A-Aj, A+Aj, A+Aj, A-Aj |
| 20 | Polarization 1 | A-Aj, A+Aj, A-Aj, A-Aj, -A-Aj, -A+Aj, A+Aj, -A+Aj, -A-Aj, A+Aj, -A-Aj, -A+Aj |
| | Polarization 2 | A+Aj, -A+Aj, A-Aj, A-Aj, -A+Aj, -A-Aj, -A-Aj, A-Aj, -A-Aj, A+Aj, A+Aj, -A+Aj |
| 21 | Polarization 1 | A-Aj, A+Aj, A-Aj, A-Aj, -A-Aj, -A+Aj, A+Aj, -A+Aj, -A-Aj, A+Aj, -A-Aj, -A+Aj |
| | Polarization 2 | -A-Aj, A-Aj, -A+Aj, -A+Aj, A-Aj, A+Aj, A+Aj, -A+Aj, A+Aj, -A-Aj, -A-Aj, A-Aj |
| 22 | Polarization 1 | A-Aj, A+Aj, A-Aj, A-Aj, -A-Aj, -A+Aj, A+Aj, -A+Aj, -A-Aj, A+Aj, -A-Aj, -A+Aj |
| | Polarization 2 | A-Aj, A+Aj, -A-Aj, -A-Aj, A+Aj, -A+Aj, -A+Aj, -A-Aj, -A+Aj, A-Aj, A-Aj, A+Aj |
| 23 | Polarization 1 | -A+Aj, -A-Aj, -A-Aj, A+Aj, A-Aj, A+Aj, A+Aj, -A+Aj, A-Aj, A-Aj, -A+Aj, -A-Aj |
| | Polarization 2 | A-Aj, -A-Aj, A+Aj, -A-Aj, A-Aj, A+Aj, A-Aj, -A-Aj, -A+Aj, -A+Aj, A+Aj, -A+Aj |
| 24 | Polarization 1 | -A+Aj, -A-Aj, -A-Aj, A+Aj, A-Aj, A+Aj, A+Aj, -A+Aj, A-Aj, A-Aj, -A+Aj, -A-Aj |
| | Polarization 2 | -A+Aj, A+Aj, -A-Aj, A+Aj, -A+Aj, -A-Aj, -A+Aj, A+Aj, A-Aj, A-Aj, -A-Aj, A-Aj |
| 25 | Polarization 1 | -A+Aj, -A-Aj, -A-Aj, A+Aj, A-Aj, A+Aj, A+Aj, -A+Aj, A-Aj, A-Aj, -A+Aj, -A-Aj |
| | Polarization 2 | -A-Aj, -A+Aj, A-Aj, -A+Aj, -A-Aj, A-Aj, -A-Aj, -A+Aj, A+Aj, A+Aj, A-Aj, A+Aj |
| 26 | Polarization 1 | -A-Aj, -A+Aj, -A+Aj, A-Aj, A+Aj, A-Aj, A-Aj, -A-Aj, A+Aj, A+Aj, -A-Aj, -A+Aj |
| | Polarization 2 | A+Aj, -A+Aj, A-Aj, -A+Aj, A+Aj, A-Aj, A+Aj, -A+Aj, -A-Aj, -A-Aj, A-Aj, -A-Aj |

(continued)

| Index | Polarization | Training sequence |
|---|---|---|
| 27 | Polarization 1 | -A-Aj, -A+Aj, -A+Aj, A-Aj, A+Aj, A-Aj, A-Aj, -A-Aj, A+Aj, A+Aj, -A-Aj, -A+Aj |
| | Polarization 2 | -A-Aj, A-Aj, -A+Aj, A-Aj, -A-Aj, -A+Aj, -A-Aj, A-Aj, A+Aj, A+Aj, -A+Aj, A+Aj |
| 28 | Polarization 1 | -A-Aj, -A+Aj, -A+Aj, A-Aj, A+Aj, A-Aj, A-Aj, -A-Aj, A+Aj, A+Aj, -A-Aj, -A+Aj |
| | Polarization 2 | -A+Aj, -A-Aj, A+Aj, -A-Aj, -A+Aj, A+Aj, -A+Aj, -A-Aj, A-Aj, A-Aj, A+Aj, A-Aj |
| 29 | Polarization 1 | A+Aj, -A+Aj, A-Aj, -A+Aj, A+Aj, A-Aj, A+Aj, -A+Aj, -A-Aj, -A-Aj, A-Aj, -A-Aj |
| | Polarization 2 | A-Aj, -A-Aj, -A-Aj, A+Aj, -A+Aj, A+Aj, A+Aj, A-Aj, -A+Aj, -A+Aj, A-Aj, -A-Aj |
| 30 | Polarization 1 | A+Aj, -A+Aj, A-Aj, -A+Aj, A+Aj, A-Aj, A+Aj, -A+Aj, -A-Aj, -A-Aj, A-Aj, -A-Aj |
| | Polarization 2 | -A+Aj, A+Aj, A+Aj, -A-Aj, A-Aj, -A-Aj, -A-Aj, -A+Aj, A-Aj, A-Aj, -A+Aj, A+Aj |
| 31 | Polarization 1 | A+Aj, -A+Aj, A-Aj, -A+Aj, A+Aj, A-Aj, A+Aj, -A+Aj, -A-Aj, -A-Aj, A-Aj, -A-Aj |
| | Polarization 2 | A+Aj, A-Aj, A-Aj, -A+Aj, -A-Aj, -A+Aj, -A+Aj, A+Aj, -A-Aj, -A-Aj, A+Aj, A-Aj |
| 32 | Polarization 1 | A-Aj, -A-Aj, A+Aj, -A-Aj, A-Aj, A+Aj, A-Aj, -A-Aj, -A+Aj, -A+Aj, A+Aj, -A+Aj |
| | Polarization 2 | A+Aj, -A+Aj, -A+Aj, A-Aj, -A-Aj, A-Aj, A-Aj, A+Aj, -A-Aj, -A-Aj, A+Aj, -A+Aj |
| 33 | Polarization 1 | A-Aj, -A-Aj, A+Aj, -A-Aj, A-Aj, A+Aj, A-Aj, -A-Aj, -A+Aj, -A+Aj, A+Aj, -A+Aj |
| | Polarization 2 | -A-Aj, A-Aj, A-Aj, -A+Aj, A+Aj, -A+Aj, -A+Aj, -A-Aj, A+Aj, A+Aj, -A-Aj, A-Aj |
| 34 | Polarization 1 | A-Aj, -A-Aj, A+Aj, -A-Aj, A-Aj, A+Aj, A-Aj, -A-Aj, -A+Aj, -A+Aj, A+Aj, -A+Aj |
| | Polarization 2 | A-Aj, A+Aj, A+Aj, -A-Aj, -A+Aj, -A-Aj, -A-Aj, A-Aj, -A+Aj, -A+Aj, A-Aj, A+Aj |
| 35 | Polarization 1 | A-Aj, -A-Aj, -A-Aj, A+Aj, -A+Aj, A+Aj, A+Aj, A-Aj, -A+Aj, -A+Aj, A-Aj, -A-Aj |
| | Polarization 2 | -A-Aj, A-Aj, -A+Aj, A-Aj, -A-Aj, -A+Aj, -A-Aj, A-Aj, A+Aj, A+Aj, -A+Aj, A+Aj |
| 36 | Polarization 1 | A-Aj, -A-Aj, -A-Aj, A+Aj, -A+Aj, A+Aj, A+Aj, A-Aj, -A+Aj, -A+Aj, A-Aj, -A-Aj |
| | Polarization 2 | -A+Aj, -A-Aj, A+Aj, -A-Aj, -A+Aj, A+Aj, -A+Aj, -A-Aj, A-Aj, A-Aj, A+Aj, A-Aj |
| 37 | Polarization 1 | A+Aj, -A+Aj, -A+Aj, A-Aj, -A-Aj, A-Aj, A-Aj, A+Aj, -A-Aj, -A-Aj, A+Aj, -A+Aj |
| | Polarization 2 | -A+Aj, A+Aj, -A-Aj, A+Aj, -A+Aj, -A-Aj, -A+Aj, A+Aj, A-Aj, A-Aj, -A-Aj, A-Aj |
| 38 | Polarization 1 | A+Aj, -A+Aj, -A+Aj, A-Aj, -A-Aj, A-Aj, A-Aj, A+Aj, -A-Aj, -A-Aj, A+Aj, -A+Aj |
| | Polarization 2 | -A-Aj, -A+Aj, A-Aj, -A+Aj, -A-Aj, A-Aj, -A-Aj, -A+Aj, A+Aj, A+Aj, A-Aj, A+Aj |
| 39 | Polarization 1 | A+Aj, -A+Aj, A+Aj, A+Aj, A-Aj, -A-Aj, -A+Aj, -A-Aj, A-Aj, -A+Aj, A-Aj, -A-Aj |
| | Polarization 2 | A+Aj, -A+Aj, A-Aj, A-Aj, -A+Aj, -A-Aj, -A-Aj, A-Aj, -A-Aj, A+Aj, A+Aj, -A+Aj |
| 40 | Polarization 1 | A+Aj, -A+Aj, A+Aj, A+Aj, A-Aj, -A-Aj, -A+Aj, -A-Aj, A-Aj, -A+Aj, A-Aj, -A-Aj |
| | Polarization 2 | -A-Aj, A-Aj, -A+Aj, -A+Aj, A-Aj, A+Aj, A+Aj, -A+Aj, A+Aj, -A-Aj, -A-Aj, A-Aj |
| 41 | Polarization 1 | A+Aj, -A+Aj, A+Aj, A+Aj, A-Aj, -A-Aj, -A+Aj, -A-Aj, A-Aj, -A+Aj, A-Aj, -A-Aj |
| | Polarization 2 | A-Aj, A+Aj, -A-Aj, -A-Aj, A+Aj, -A+Aj, -A+Aj, -A-Aj, -A+Aj, A-Aj, A-Aj, A+Aj |
| 42 | Polarization 1 | A-Aj, -A-Aj, A-Aj, A-Aj, A+Aj, -A+Aj, -A-Aj, -A+Aj, A+Aj, -A-Aj, A+Aj, -A+Aj |
| | Polarization 2 | A-Aj, -A-Aj, A+Aj, A+Aj, -A-Aj, -A+Aj, -A+Aj, A+Aj, -A+Aj, A-Aj, A-Aj, -A-Aj |
| 43 | Polarization 1 | A-Aj, -A-Aj, A-Aj, A-Aj, A+Aj, -A+Aj, -A-Aj, -A+Aj, A+Aj, -A-Aj, A+Aj, -A+Aj |
| | Polarization 2 | -A+Aj, A+Aj, -A-Aj, -A-Aj, A+Aj, A-Aj, A-Aj, -A-Aj, A-Aj, -A+Aj, -A+Aj, A+Aj |
| 44 | Polarization 1 | A-Aj, -A-Aj, A-Aj, A-Aj, A+Aj, -A+Aj, -A-Aj, -A+Aj, A+Aj, -A-Aj, A+Aj, -A+Aj |
| | Polarization 2 | A+Aj, A-Aj, -A+Aj, -A+Aj, A-Aj, -A-Aj, -A-Aj, -A+Aj, -A-Aj, A+Aj, A+Aj, A-Aj |
| 45 | Polarization 1 | A-Aj, -A-Aj, A+Aj, A+Aj, -A-Aj, -A+Aj, -A+Aj, A+Aj, -A+Aj, A-Aj, A-Aj, -A-Aj |
| | Polarization 2 | -A+Aj, A+Aj, -A+Aj, -A+Aj, -A-Aj, A-Aj, A+Aj, A-Aj, -A-Aj, A+Aj, -A-Aj, A-Aj |

(continued)

| Index | Polarization | Training sequence |
|---|---|---|
| 46 | Polarization 1 | A-Aj, -A-Aj, A+Aj, A+Aj, -A-Aj, -A+Aj, -A+Aj, A+Aj, -A+Aj, A-Aj, A-Aj, -A-Aj |
| | Polarization 2 | -A-Aj, -A+Aj, -A-Aj, -A-Aj, A-Aj, A+Aj, -A+Aj, A+Aj, A-Aj, -A+Aj, A-Aj, A+Aj |
| 47 | Polarization 1 | A+Aj, -A+Aj, A-Aj, A-Aj, -A+Aj, -A-Aj, -A-Aj, A-Aj, -A-Aj, A+Aj, A+Aj, -A+Aj |
| | Polarization 2 | -A-Aj, A-Aj, -A-Aj, -A-Aj, -A+Aj, A+Aj, A-Aj, A+Aj, -A+Aj, A-Aj, -A+Aj, A+Aj |
| 48 | Polarization 1 | A+Aj, -A+Aj, A-Aj, A-Aj, -A+Aj, -A-Aj, -A-Aj, A-Aj, -A-Aj, A+Aj, A+Aj, -A+Aj |
| | Polarization 2 | -A+Aj, -A-Aj, -A+Aj, -A+Aj. A+Aj, A-Aj, -A-Aj, A-Aj, A+Aj, -A-Aj, A+Aj, A-Aj |
| 49 | Polarization 1 | -A-Aj, A-Aj, -A+Aj, -A+Aj, A-Aj, A+Aj, A+Aj, -A+Aj, A+Aj, -A-Aj, -A-Aj, A-Aj |
| | Polarization 2 | -A-Aj, A-Aj, -A-Aj, -A-Aj, -A+Aj, A+Aj, A-Aj, A+Aj, -A+Aj, A-Aj, -A+Aj, A+Aj |
| 50 | Polarization 1 | -A-Aj, A-Aj, -A+Aj, -A+Aj, A-Aj, A+Aj, A+Aj, -A+Aj, A+Aj, -A-Aj, -A-Aj, A-Aj |
| | Polarization 2 | -A+Aj, -A-Aj, -A+Aj, -A+Aj. A+Aj, A-Aj, -A-Aj, A-Aj, A+Aj, -A-Aj, A+Aj, A-Aj |
| 51 | Polarization 1 | -A+Aj, A+Aj, -A-Aj, -A-Aj, A+Aj, A-Aj, A-Aj, -A-Aj, A-Aj, -A+Aj, -A+Aj, A+Aj |
| | Polarization 2 | -A+Aj, A+Aj, -A+Aj, -A+Aj, -A-Aj, A-Aj, A+Aj, A-Aj, -A-Aj, A+Aj, -A-Aj, A-Aj |
| 52 | Polarization 1 | -A+Aj, A+Aj, -A-Aj, -A-Aj, A+Aj, A-Aj, A-Aj, -A-Aj, A-Aj, -A+Aj, -A+Aj, A+Aj |
| | Polarization 2 | -A-Aj, -A+Aj, -A-Aj, -A-Aj, A-Aj, A+Aj, -A+Aj, A+Aj, A-Aj, -A+Aj, A-Aj, A+Aj |
| 53 | Polarization 1 | -A+Aj, A+Aj, -A+Aj, -A+Aj, -A-Aj, A-Aj, A+Aj, A-Aj, -A-Aj, A+Aj, -A-Aj, A-Aj |
| | Polarization 2 | A+Aj, A-Aj, -A+Aj, -A+Aj, A-Aj, -A-Aj, -A-Aj, -A+Aj, -A-Aj, A+Aj, A+Aj, A-Aj |
| 54 | Polarization 1 | -A-Aj, A-Aj, -A-Aj, -A-Aj, -A+Aj, A+Aj, A-Aj, A+Aj, -A+Aj, A-Aj, -A+Aj, A+Aj |
| | Polarization 2 | A-Aj, A+Aj, -A-Aj, -A-Aj, A+Aj, -A+Aj, -A+Aj, -A-Aj, -A+Aj, A-Aj, A-Aj, A+Aj |
| 55 | Polarization 1 | -A-Aj, A-Aj, A-Aj, -A+Aj, A+Aj, -A+Aj, -A+Aj, -A-Aj, A+Aj, A+Aj, -A-Aj, A-Aj |
| | Polarization 2 | -A+Aj, A+Aj, -A-Aj, A+Aj, -A+Aj, -A-Aj, -A+Aj, A+Aj, A-Aj, A-Aj, -A-Aj, A-Aj |
| 56 | Polarization 1 | -A-Aj, A-Aj, A-Aj, -A+Aj, A+Aj, -A+Aj, -A+Aj, -A-Aj, A+Aj, A+Aj, -A-Aj, A-Aj |
| | Polarization 2 | -A-Aj, -A+Aj, A-Aj, -A+Aj, -A-Aj, A-Aj, -A-Aj, -A+Aj, A+Aj, A+Aj, A-Aj, A+Aj |
| 57 | Polarization 1 | -A+Aj, A+Aj, A+Aj, -A-Aj, A-Aj, -A-Aj, -A-Aj, -A+Aj, A-Aj, A-Aj, -A+Aj, A+Aj |
| | Polarization 2 | -A-Aj, A-Aj, -A+Aj, A-Aj, -A-Aj, -A+Aj, -A-Aj, A-Aj, A+Aj, A+Aj, -A+Aj, A+Aj |
| 58 | Polarization 1 | -A+Aj, A+Aj, A+Aj, -A-Aj, A-Aj, -A-Aj, -A-Aj, -A+Aj, A-Aj, A-Aj, -A+Aj, A+Aj |
| | Polarization 2 | -A+Aj, -A-Aj, A+Aj, -A-Aj, -A+Aj, A+Aj, -A+Aj, -A-Aj, A-Aj, A-Aj, A+Aj, A-Aj |
| 59 | Polarization 1 | -A+Aj, A+Aj, -A-Aj, A+Aj, -A+Aj, -A-Aj, -A+Aj, A+Aj, A-Aj, A-Aj, -A-Aj, A-Aj |
| | Polarization 2 | A-Aj, A+Aj, A+Aj, -A-Aj, -A+Aj, -A-Aj, -A-Aj, A-Aj, -A+Aj, -A+Aj, A-Aj, A+Aj |
| 60 | Polarization 1 | -A-Aj, A-Aj, -A+Aj, A-Aj, -A-Aj, -A+Aj, -A-Aj, A-Aj, A+Aj, A+Aj, -A+Aj, A+Aj |
| | Polarization 2 | A+Aj, A-Aj, A-Aj, -A+Aj, -A-Aj, -A+Aj, -A+Aj, A+Aj, -A-Aj, -A-Aj, A+Aj, A-Aj |
| 61 | Polarization 1 | A+Aj, A-Aj, A-Aj, -A+Aj, -A-Aj, -A+Aj, -A+Aj, A+Aj, -A-Aj, -A-Aj, A+Aj, A-Aj |
| | Polarization 2 | -A+Aj, -A-Aj, A+Aj, -A-Aj, -A+Aj, A+Aj, -A+Aj, -A-Aj, A-Aj, A-Aj, A+Aj, A-Aj |
| 62 | Polarization 1 | A-Aj, A+Aj, A+Aj, -A-Aj, -A+Aj, -A-Aj, -A-Aj, A-Aj, -A+Aj, -A+Aj, A-Aj, A+Aj |
| | Polarization 2 | -A-Aj, -A+Aj, A-Aj, -A+Aj, -A-Aj, A-Aj, -A-Aj, -A+Aj, A+Aj, A+Aj, A-Aj, A+Aj |
| 63 | Polarization 1 | -A+Aj, -A-Aj, -A+Aj, -A+Aj. A+Aj, A-Aj, -A-Aj, A-Aj, A+Aj, -A-Aj, A+Aj, A-Aj |
| | Polarization 2 | A-Aj, A+Aj, -A-Aj, -A-Aj, A+Aj, -A+Aj, -A+Aj, -A-Aj, -A+Aj, A-Aj, A-Aj, A+Aj |
| 64 | Polarization 1 | -A-Aj, -A+Aj, -A-Aj, -A-Aj, A-Aj, A+Aj, -A+Aj, A+Aj, A-Aj, -A+Aj, A-Aj, A+Aj |
| | Polarization 2 | A+Aj, A-Aj, -A+Aj, -A+Aj, A-Aj, -A-Aj, -A-Aj, -A+Aj, -A-Aj, A+Aj, A+Aj, A-Aj |

(5) When $N_{TS}$ = 14, the training sequence is one item in the following Table 35.

**Table 35**

| Index | Polarization | Training sequence |
|---|---|---|
| 1 | Polarization 1 | -A+Aj, A-Aj, A-Aj, A+Aj, -A+Aj, A+Aj, A-Aj, -A+Aj, A-Aj, -A-Aj, -A-Aj, A+Aj, -A+Aj, -A-Aj |
| | Polarization 2 | -A-Aj, A+Aj, -A-Aj, -A-Aj, A-Aj, A+Aj, -A-Aj, A+Aj, -A+Aj, A+Aj, A-Aj, A-Aj, -A+Aj, -A+Aj |
| 2 | Polarization 1 | -A+Aj, A-Aj, A-Aj, A+Aj, -A+Aj, A+Aj, A-Aj, -A+Aj, A-Aj, -A-Aj, -A-Aj, A+Aj, -A+Aj, -A-Aj |
| | Polarization 2 | A+Aj, -A-Aj, A+Aj, A+Aj, -A+Aj, -A-Aj, A+Aj, -A-Aj, A-Aj, -A-Aj, -A+Aj, -A+Aj, A-Aj, A-Aj |
| 3 | Polarization 1 | -A-Aj, A+Aj, A+Aj, A-Aj, -A-Aj, A-Aj, A+Aj, -A-Aj, A+Aj, -A+Aj, -A+Aj, A-Aj, -A-Aj, -A+Aj |
| | Polarization 2 | -A+Aj, A-Aj, -A+Aj, -A+Aj, A+Aj, A-Aj, -A+Aj, A-Aj, -A-Aj, A-Aj, A+Aj, A+Aj, -A-Aj, -A-Aj |
| 4 | Polarization 1 | -A-Aj, A+Aj, A+Aj, A-Aj, -A-Aj, A-Aj, A+Aj, -A-Aj, A+Aj, -A+Aj, -A+Aj, A-Aj, -A-Aj, -A+Aj |
| | Polarization 2 | A-Aj, -A+Aj, A-Aj, A-Aj, -A-Aj, -A+Aj, A-Aj, -A+Aj, A+Aj, -A+Aj, -A-Aj, -A-Aj, A+Aj, A+Aj |
| 5 | Polarization 1 | A-Aj, -A+Aj, A-Aj, A-Aj, A+Aj, -A+Aj, A-Aj, -A+Aj, -A-Aj, -A+Aj, A+Aj, A+Aj, -A-Aj, -A-Aj |
| | Polarization 2 | A+Aj, -A-Aj, -A-Aj, A-Aj, A+Aj, A-Aj, -A-Aj, A+Aj, -A-Aj, -A+Aj, -A+Aj, A-Aj, A+Aj, -A+Aj |
| 6 | Polarization 1 | A-Aj, -A+Aj, A-Aj, A-Aj, A+Aj, -A+Aj, A-Aj, -A+Aj, -A-Aj, -A+Aj, A+Aj, A+Aj, -A-Aj, -A-Aj |
| | Polarization 2 | -A-Aj, A+Aj, A+Aj, -A+Aj, -A-Aj, -A+Aj, A+Aj, -A-Aj, A+Aj, A-Aj, A-Aj, -A+Aj, -A-Aj, A-Aj |
| 7 | Polarization 1 | A+Aj, -A-Aj, A+Aj, A+Aj, A-Aj, -A-Aj, A+Aj, -A-Aj, -A+Aj, -A-Aj, A-Aj, A-Aj, -A+Aj, -A+Aj |
| | Polarization 2 | A-Aj, -A+Aj, -A+Aj, A+Aj, A-Aj, A+Aj, -A+Aj, A-Aj, -A+Aj, -A-Aj, -A-Aj, A+Aj, A-Aj, -A-Aj |
| 8 | Polarization 1 | A+Aj, -A-Aj, A+Aj, A+Aj, A-Aj, -A-Aj, A+Aj, -A-Aj, -A+Aj, -A-Aj, A-Aj, A-Aj, -A+Aj, -A+Aj |
| | Polarization 2 | -A+Aj, A-Aj, A-Aj, -A-Aj, -A+Aj, -A-Aj, A-Aj, -A+Aj, A-Aj, A+Aj, A+Aj, -A-Aj, -A+Aj, A+Aj |
| 9 | Polarization 1 | -A+Aj, A-Aj, -A+Aj, -A+Aj, A+Aj, A-Aj, -A+Aj, A-Aj, -A-Aj, A-Aj, A+Aj, A+Aj, -A-Aj, -A-Aj |
| | Polarization 2 | A+Aj, -A-Aj, -A-Aj, -A+Aj, A+Aj, -A+Aj, -A-Aj, A+Aj, -A-Aj, A-Aj, A-Aj, -A+Aj, A+Aj, A-Aj |
| 10 | Polarization 1 | -A-Aj, A+Aj, -A-Aj, -A-Aj, A-Aj, A+Aj, -A-Aj, A+Aj, -A+Aj, A+Aj, A-Aj, A-Aj, -A+Aj, -A+Aj |
| | Polarization 2 | A-Aj, -A+Aj, -A+Aj, -A-Aj, A-Aj, -A-Aj, -A+Aj, A-Aj, -A+Aj, A+Aj, A+Aj, -A-Aj, A-Aj, A+Aj |
| 11 | Polarization 1 | A-Aj, A-Aj, -A+Aj, -A+Aj, A+Aj, A-Aj, A+Aj, -A-Aj, A+Aj, -A+Aj, -A-Aj, -A-Aj, A+Aj, -A-Aj |
| | Polarization 2 | A+Aj, -A+Aj, -A-Aj, A+Aj, A+Aj, A-Aj, -A+Aj, A-Aj, -A-Aj, -A+Aj, -A-Aj, A-Aj, A-Aj, -A+Aj |
| 12 | Polarization 1 | A-Aj, A-Aj, -A+Aj, -A+Aj, A+Aj, A-Aj, A+Aj, -A-Aj, A+Aj, -A+Aj, -A-Aj, -A-Aj, A+Aj, -A-Aj |
| | Polarization 2 | -A-Aj, A-Aj, A+Aj, -A-Aj, -A-Aj, -A+Aj, A-Aj, -A+Aj, A+Aj, A-Aj, A+Aj, -A+Aj, -A+Aj, A-Aj |
| 13 | Polarization 1 | A+Aj, A+Aj, -A-Aj, -A-Aj, A-Aj, A+Aj, A-Aj, -A+Aj, A-Aj, -A-Aj, -A+Aj, -A+Aj, A-Aj, -A+Aj |
| | Polarization 2 | A-Aj, -A-Aj, -A+Aj, A-Aj, A-Aj, A+Aj, -A-Aj, A+Aj, -A+Aj, -A-Aj, -A+Aj, A+Aj, A+Aj, -A-Aj |
| 14 | Polarization 1 | A+Aj, A+Aj, -A-Aj, -A-Aj, A-Aj, A+Aj, A-Aj, -A+Aj, A-Aj, -A-Aj, -A+Aj, -A+Aj, A-Aj, -A+Aj |
| | Polarization 2 | -A+Aj, A+Aj, A-Aj, -A+Aj, -A+Aj, -A-Aj, A+Aj, -A-Aj, A-Aj, A+Aj, A-Aj, -A-Aj, -A-Aj, A+Aj |
| 15 | Polarization 1 | -A+Aj, -A+Aj, A-Aj, A-Aj, A+Aj, -A+Aj, A+Aj, -A-Aj, A+Aj, A-Aj, -A-Aj, -A-Aj, A+Aj, -A-Aj |
| | Polarization 2 | -A-Aj, -A+Aj, A+Aj, -A-Aj, -A-Aj, A-Aj, -A+Aj, A-Aj, A+Aj, -A+Aj, A+Aj, A-Aj, A-Aj, -A+Aj |
| 16 | Polarization 1 | -A+Aj, -A+Aj, A-Aj, A-Aj, A+Aj, -A+Aj, A+Aj, -A-Aj, A+Aj, A-Aj, -A-Aj, -A-Aj, A+Aj, -A-Aj |
| | Polarization 2 | A+Aj, A-Aj, -A-Aj, A+Aj, A+Aj, -A+Aj, A-Aj, -A+Aj, -A-Aj, A-Aj, -A-Aj, -A+Aj, -A+Aj, A-Aj |
| 17 | Polarization 1 | -A-Aj, -A-Aj, A+Aj, A+Aj, A-Aj, -A-Aj, A-Aj, -A+Aj, A-Aj, A+Aj, -A+Aj, -A+Aj, A-Aj, -A+Aj |
| | Polarization 2 | -A+Aj, -A-Aj, A-Aj, -A+Aj, -A+Aj, A+Aj, -A-Aj, A+Aj, A-Aj, -A-Aj, A-Aj, A+Aj, A+Aj, -A-Aj |
| 18 | Polarization 1 | -A-Aj, -A-Aj, A+Aj, A+Aj, A-Aj, -A-Aj, A-Aj, -A+Aj, A-Aj, A+Aj, -A+Aj, -A+Aj, A-Aj, -A+Aj |
| | Polarization 2 | A-Aj, A+Aj, -A+Aj, A-Aj, A-Aj, -A-Aj, A+Aj, -A-Aj, -A+Aj, A+Aj, -A+Aj, -A-Aj, -A-Aj, A+Aj |
| 19 | Polarization 1 | A-Aj, -A+Aj, -A+Aj, A+Aj, A-Aj, A+Aj, -A+Aj, A-Aj, -A+Aj, -A-Aj, -A-Aj, A+Aj, A-Aj, -A-Aj |
| | Polarization 2 | -A-Aj, A+Aj, -A-Aj, -A-Aj, -A+Aj, A+Aj, -A-Aj, A+Aj, A-Aj, A+Aj, -A+Aj, -A+Aj, A-Aj, A-Aj |

(continued)

| Index | Polarization | Training sequence |
|---|---|---|
| 20 | Polarization 1 | A-Aj, -A-Aj, -A+Aj, A-Aj, A-Aj, A+Aj, -A-Aj, A+Aj, -A+Aj, -A-Aj, -A+Aj, A+Aj, A+Aj, -A-Aj |
| | Polarization 2 | -A-Aj, -A-Aj, A+Aj, A+Aj, -A+Aj, -A-Aj, -A+Aj, A-Aj, -A+Aj, A+Aj, A-Aj, A-Aj, -A+Aj, A-Aj |
| 21 | Polarization 1 | A+Aj, -A+Aj, -A-Aj, A+Aj, A+Aj, A-Aj, -A+Aj, A-Aj, -A-Aj, -A+Aj, -A-Aj, A-Aj, A-Aj, -A+Aj |
| | Polarization 2 | -A+Aj, -A+Aj, A-Aj, A-Aj, -A-Aj, -A+Aj, -A-Aj, A+Aj, -A-Aj, A-Aj, A+Aj, A+Aj, -A-Aj, A+Aj |
| 22 | Polarization 1 | A+Aj, -A-Aj, -A-Aj, A-Aj, A+Aj, A-Aj, -A-Aj, A+Aj, -A-Aj, -A+Aj, -A+Aj, A-Aj, A+Aj, -A+Aj |
| | Polarization 2 | -A+Aj, A-Aj, -A+Aj, -A+Aj, -A-Aj, A-Aj, -A+Aj, A-Aj, A+Aj, A-Aj, -A-Aj, -A-Aj, A+Aj, A+Aj |
| 23 | Polarization 1 | -A+Aj, -A-Aj, A-Aj, -A+Aj, -A+Aj, A+Aj, -A-Aj, A+Aj, A-Aj, -A-Aj, A-Aj, A+Aj, A+Aj, -A-Aj |
| | Polarization 2 | A+Aj, A+Aj, -A-Aj, -A-Aj, -A+Aj, A+Aj, -A+Aj, A-Aj, -A+Aj, -A-Aj, A-Aj, A-Aj, -A+Aj, A-Aj |
| 24 | Polarization 1 | -A-Aj, -A+Aj, A+Aj, -A-Aj, -A-Aj, A-Aj, -A+Aj, A-Aj, A+Aj, -A+Aj, A+Aj, A-Aj, A-Aj, -A+Aj |
| | Polarization 2 | A-Aj, A-Aj, -A+Aj, -A+Aj, -A-Aj, A-Aj, -A-Aj, A+Aj, -A-Aj, -A+Aj, A+Aj, A+Aj, -A-Aj, A+Aj |
| 25 | Polarization 1 | A+Aj, A-Aj, -A-Aj, A+Aj, A+Aj, -A+Aj, A-Aj, -A+Aj, -A-Aj, A-Aj, -A-Aj, -A+Aj, -A+Aj, A-Aj |
| | Polarization 2 | A-Aj, A-Aj, -A+Aj, -A+Aj, -A-Aj, A-Aj, -A-Aj, A+Aj, -A-Aj, -A+Aj, A+Aj, A+Aj, -A-Aj, A+Aj |
| 26 | Polarization 1 | A-Aj, A+Aj, -A+Aj, A-Aj, A-Aj, -A-Aj, A+Aj, -A-Aj, -A+Aj, A+Aj, -A+Aj, -A-Aj, -A-Aj, A+Aj |
| | Polarization 2 | A+Aj, A+Aj, -A-Aj, -A-Aj, -A+Aj, A+Aj, -A+Aj, A-Aj, -A+Aj, -A-Aj, A-Aj, A-Aj, -A+Aj, A-Aj |
| 27 | Polarization 1 | -A-Aj, A+Aj, A+Aj, -A+Aj, -A-Aj, -A+Aj, A+Aj, -A-Aj, A+Aj, A-Aj, A-Aj, -A+Aj, -A-Aj, A-Aj |
| | Polarization 2 | -A+Aj, A-Aj, -A+Aj, -A+Aj, -A-Aj, A-Aj, -A+Aj, A-Aj, A+Aj, A-Aj, -A-Aj, -A-Aj, A+Aj, A+Aj |
| 28 | Polarization 1 | -A-Aj, A-Aj, A+Aj, -A-Aj, -A-Aj, -A+Aj, A-Aj, -A+Aj, A+Aj, A-Aj, A+Aj, -A+Aj, -A+Aj, A-Aj |
| | Polarization 2 | -A+Aj, -A+Aj, A-Aj, A-Aj, -A-Aj, -A+Aj, -A-Aj, A+Aj, -A-Aj, A-Aj, A+Aj, A+Aj, -A-Aj, A+Aj |
| 29 | Polarization 1 | -A+Aj, A+Aj, A-Aj, -A+Aj, -A+Aj, -A-Aj, A+Aj, -A-Aj, A-Aj, A+Aj, A-Aj, -A-Aj, -A-Aj, A+Aj |
| | Polarization 2 | -A-Aj, -A-Aj, A+Aj, A+Aj, -A+Aj, -A-Aj, -A+Aj, A-Aj, -A+Aj, A+Aj, A-Aj, A-Aj, -A+Aj, A-Aj |
| 30 | Polarization 1 | -A+Aj, A-Aj, A-Aj, -A-Aj, -A+Aj, -A-Aj, A-Aj, -A+Aj, A-Aj, A+Aj, A+Aj, -A-Aj, -A+Aj, A+Aj |
| | Polarization 2 | -A-Aj, A+Aj, -A-Aj, -A-Aj, -A+Aj, A+Aj, -A-Aj, A+Aj, A-Aj, A+Aj, -A+Aj, -A+Aj, A-Aj, A-Aj |
| 31 | Polarization 1 | A+Aj, -A-Aj, A+Aj, A+Aj, -A+Aj, -A-Aj, A+Aj, -A-Aj, A-Aj, -A-Aj, -A+Aj, -A+Aj, A-Aj, A-Aj |
| | Polarization 2 | A-Aj, -A+Aj, -A+Aj, -A-Aj, A-Aj, -A-Aj, -A+Aj, A-Aj, -A+Aj, A+Aj, A+Aj, -A-Aj, A-Aj, A+Aj |
| 32 | Polarization 1 | A-Aj, -A+Aj, A-Aj, A-Aj, -A-Aj, -A+Aj, A-Aj, -A+Aj, A+Aj, -A+Aj, -A-Aj, -A-Aj, A+Aj, A+Aj |
| | Polarization 2 | A+Aj, -A-Aj, -A-Aj, -A+Aj, A+Aj, -A+Aj, -A-Aj, A+Aj, -A-Aj, A-Aj, A-Aj, -A+Aj, A+Aj, A-Aj |

(6) When $N_{TS}$ = 16, the training sequence is one item in the following Table 36.

**Table 36**

| Index | Polarization | Training sequence |
|---|---|---|
| 1 | Polarization 1 | A+Aj, A-Aj, A-Aj, -A-Aj, A-Aj, -A+Aj, A+Aj, -A+Aj, A+Aj, A-Aj, -A+Aj, A+Aj, -A+Aj, -A-Aj, -A-Aj, -A-Aj |
| | Polarization 2 | A-Aj, A-Aj, A-Aj, A+Aj, -A+Aj, A-Aj, -A+Aj, -A-Aj, -A-Aj, A+Aj, -A+Aj, -A-Aj, -A+Aj, A+Aj, A+Aj, -A-Aj |
| 2 | Polarization 1 | A+Aj, A-Aj, A-Aj, -A-Aj, A-Aj, -A+Aj, A+Aj, -A+Aj, A+Aj, A-Aj, -A+Aj, A+Aj, -A+Aj, -A-Aj, -A-Aj, -A-Aj |
| | Polarization 2 | -A-Aj, -A-Aj, -A-Aj, A-Aj, A+Aj, -A-Aj, A+Aj, -A+Aj, -A+Aj, A-Aj, A+Aj, -A+Aj, A+Aj, A-Aj, A-Aj, - A+Aj |

(continued)

| Index | Polarization | Training sequence |
|---|---|---|
| 3 | Polarization 1 | A+Aj, A-Aj, A-Aj, -A-Aj, A-Aj, -A+Aj, A+Aj, -A+Aj, A+Aj, A-Aj, -A+Aj, A+Aj, -A+Aj, -A-Aj, -A-Aj, -A-Aj |
|  | Polarization 2 | A+Aj, A+Aj, A+Aj, -A+Aj, -A-Aj, A+Aj, -A-Aj, A-Aj, A-Aj, -A+Aj, -A-Aj, A-Aj, -A-Aj, -A+Aj, -A+Aj, A-Aj |
| 4 | Polarization 1 | A+Aj, A-Aj, A-Aj, -A-Aj, A-Aj, -A+Aj, A+Aj, -A+Aj, A+Aj, A-Aj, -A+Aj, A+Aj, -A+Aj, -A-Aj, -A-Aj, -A-Aj |
|  | Polarization 2 | -A+Aj, -A+Aj, -A+Aj, -A-Aj, A-Aj, -A+Aj, A-Aj, A+Aj, A+Aj, -A-Aj, A-Aj, A+Aj, A-Aj, -A-Aj, -A-Aj, A+Aj |
| 5 | Polarization 1 | A-Aj, A+Aj, A+Aj, -A+Aj, A+Aj, -A-Aj, A-Aj, -A-Aj, A-Aj, A+Aj, -A-Aj, A-Aj, -A-Aj, -A+Aj, -A+Aj, - A+Aj |
|  | Polarization 2 | A+Aj, A+Aj, A+Aj, A-Aj, -A-Aj, A+Aj, -A-Aj, -A+Aj, -A+Aj, A-Aj, -A-Aj, -A+Aj, -A-Aj, A-Aj, A-Aj, - A+Aj |
| 6 | Polarization 1 | A-Aj, A+Aj, A+Aj, -A+Aj, A+Aj, -A-Aj, A-Aj, -A-Aj, A-Aj, A+Aj, -A-Aj, A-Aj, -A-Aj, -A+Aj, -A+Aj, - A+Aj |
|  | Polarization 2 | -A+Aj, -A+Aj, -A+Aj, A+Aj, A-Aj, -A+Aj, A-Aj, -A-Aj, -A-Aj, A+Aj, A-Aj, -A-Aj, A-Aj, A+Aj, A+Aj, -A-Aj |
| 7 | Polarization 1 | A-Aj, A+Aj, A+Aj, -A+Aj, A+Aj, -A-Aj, A-Aj, -A-Aj, A-Aj, A+Aj, -A-Aj, A-Aj, -A-Aj, -A+Aj, -A+Aj, - A+Aj |
|  | Polarization 2 | A-Aj, A-Aj, A-Aj, -A-Aj, -A+Aj, A-Aj, -A+Aj, A+Aj, A+Aj, -A-Aj, -A+Aj, A+Aj, -A+Aj, -A-Aj, -A-Aj, A+Aj |
| 8 | Polarization 1 | A-Aj, A+Aj, A+Aj, -A+Aj, A+Aj, -A-Aj, A-Aj, -A-Aj, A-Aj, A+Aj, -A-Aj, A-Aj, -A-Aj, -A+Aj, -A+Aj, - A+Aj |
|  | Polarization 2 | -A-Aj, -A-Aj, -A-Aj, -A+Aj, A+Aj, -A-Aj, A+Aj, A-Aj, A-Aj, -A+Aj, A+Aj, A-Aj, A+Aj, -A+Aj, -A+Aj, A-Aj |
| 9 | Polarization 1 | A-Aj, -A+Aj, -A+Aj, A+Aj, A-Aj, A+Aj, -A+Aj, A-Aj, A-Aj, A+Aj, -A-Aj, A+Aj, -A+Aj, -A-Aj, -A-Aj, -A-Aj |
|  | Polarization 2 | A-Aj, A-Aj, A-Aj, A+Aj, -A+Aj, A+Aj, -A-Aj, -A+Aj, A+Aj, -A+Aj, A+Aj, -A-Aj, A-Aj, -A-Aj, -A-Aj, - A+Aj |
| 10 | Polarization 1 | A-Aj, -A+Aj, -A+Aj, A+Aj, A-Aj, A+Aj, -A+Aj, A-Aj, A-Aj, A+Aj, -A-Aj, A+Aj, -A+Aj, -A-Aj, -A-Aj, -A-Aj |
|  | Polarization 2 | A+Aj, A+Aj, A+Aj, -A+Aj, -A-Aj, -A+Aj, A-Aj, -A-Aj, -A+Aj, -A-Aj, -A+Aj, A-Aj, A+Aj, A-Aj, A-Aj, -A-Aj |
| 11 | Polarization 1 | A-Aj, -A+Aj, -A+Aj, A+Aj, A-Aj, A+Aj, -A+Aj, A-Aj, A-Aj, A+Aj, -A-Aj, A+Aj, -A+Aj, -A-Aj, -A-Aj, -A-Aj |
|  | Polarization 2 | -A-Aj, -A-Aj, -A-Aj, A-Aj, A+Aj, A-Aj, -A+Aj, A+Aj, A-Aj, A+Aj, A-Aj, -A+Aj, -A-Aj, -A+Aj, -A+Aj, A+Aj |
| 12 | Polarization 1 | A-Aj, -A+Aj, -A+Aj, A+Aj, A-Aj, A+Aj, -A+Aj, A-Aj, A-Aj, A+Aj, -A-Aj, A+Aj, -A+Aj, -A-Aj, -A-Aj, -A-$^{A}$j |
|  | Polarization 2 | -A+Aj, -A+Aj, -A+Aj, -A-Aj, A-Aj, -A-Aj, A+Aj, A-Aj, -A-Aj, A-Aj, -A-Aj, A+Aj, -A+Aj, A+Aj, A+Aj, A-Aj |
| 13 | Polarization 1 | A+Aj, -A-Aj, -A-Aj, A-Aj, A+Aj, A-Aj, -A-Aj, A+Aj, A+Aj, A-Aj, -A+Aj, A-Aj, -A-Aj, -A+Aj, -A+Aj, - A+Aj |
|  | Polarization 2 | A+Aj, A+Aj, A+Aj, A-Aj, -A-Aj, A-Aj, -A+Aj, -A-Aj, A-Aj, -A-Aj, A-Aj, -A+Aj, A+Aj, -A+Aj, -A+Aj, -A-$^{A}$j |

(continued)

| Index | Polarization | Training sequence |
|---|---|---|
| 14 | Polarization 1 | A+Aj, -A-Aj, -A-Aj, A-Aj, A+Aj, A-Aj, -A-Aj, A+Aj, A+Aj, A-Aj, -A+Aj, A-Aj, -A-Aj, -A+Aj, -A+Aj, - A+Aj |
| | Polarization 2 | A-Aj, A-Aj, A-Aj, -A-Aj, -A+Aj, -A-Aj, A+Aj, -A+Aj, -A-Aj, -A+Aj, -A-Aj, A+Aj, A-Aj, A+Aj, A+Aj, - A+Aj |
| 15 | Polarization 1 | A+Aj, -A-Aj, -A-Aj, A-Aj, A+Aj, A-Aj, -A-Aj, A+Aj, A+Aj, A-Aj, -A+Aj, A-Aj, -A-Aj, -A+Aj, -A+Aj, - A+Aj |
| | Polarization 2 | -A+Aj, -A+Aj, -A+Aj, A+Aj, A-Aj, A+Aj, -A-Aj, A-Aj, A+Aj, A-Aj, A+Aj, -A-Aj, -A+Aj, -A-Aj, -A-Aj, A-Aj |
| 16 | Polarization 1 | A+Aj, -A-Aj, -A-Aj, A-Aj, A+Aj, A-Aj, -A-Aj, A+Aj, A+Aj, A-Aj, -A+Aj, A-Aj, -A-Aj, -A+Aj, -A+Aj, - A+Aj |
| | Polarization 2 | -A-Aj, -A-Aj, -A-Aj, -A+Aj, A+Aj, -A+Aj, A-Aj, A+Aj, -A+Aj, A+Aj, -A+Aj, A-Aj, -A-Aj, A-Aj, A-Aj, A+Aj |
| 17 | Polarization 1 | A+Aj, A+Aj, A+Aj, A-Aj, -A-Aj, A-Aj, -A+Aj, -A-Aj, A-Aj, -A-Aj, A-Aj, -A+Aj, A+Aj, -A+Aj, -A+Aj, -A-Aj |
| | Polarization 2 | -A+Aj, A-Aj, A-Aj, A+Aj, -A+Aj, A+Aj, A-Aj, -A+Aj, -A+Aj, A+Aj, -A-Aj, A+Aj, A-Aj, -A-Aj, -A-Aj, -A-Aj |
| 18 | Polarization 1 | A+Aj, A+Aj, A+Aj, A-Aj, -A-Aj, A-Aj, -A+Aj, -A-Aj, A-Aj, -A-Aj, A-Aj, -A+Aj, A+Aj, -A+Aj, -A+Aj, -A-Aj |
| | Polarization 2 | A-Aj, -A+Aj, -A+Aj, -A-Aj, A-Aj, -A-Aj, -A+Aj, A-Aj, A-Aj, -A-Aj, A+Aj, -A-Aj, -A+Aj, A+Aj, A+Aj, A+Aj |
| 19 | Polarization 1 | A+Aj, A+Aj, A+Aj, A-Aj, -A-Aj, A-Aj, -A+Aj, -A-Aj, A-Aj, -A-Aj, A-Aj, -A+Aj, A+Aj, -A+Aj, -A+Aj, -A-Aj |
| | Polarization 2 | -A-Aj, A+Aj, A+Aj, -A+Aj, -A-Aj, -A+Aj, A+Aj, -A-Aj, -A-Aj, -A+Aj, A-Aj, -A+Aj, A+Aj, A-Aj, A-Aj, A-Aj |
| 20 | Polarization 1 | A-Aj, A-Aj, A-Aj, A+Aj, -A+Aj, A+Aj, -A-Aj, -A+Aj, A+Aj, -A+Aj, A+Aj, -A-Aj, A-Aj, -A-Aj, -A-Aj, - A+Aj |
| | Polarization 2 | -A-Aj, A+Aj, A+Aj, A-Aj, -A-Aj, A-Aj, A+Aj, -A-Aj, -A-Aj, A-Aj, -A+Aj, A-Aj, A+Aj, -A+Aj, -A+Aj, - A+Aj |
| 21 | Polarization 1 | A-Aj, A-Aj, A-Aj, A+Aj, -A+Aj, A+Aj, -A-Aj, -A+Aj, A+Aj, -A+Aj, A+Aj, -A-Aj, A-Aj, -A-Aj, -A-Aj, - A+Aj |
| | Polarization 2 | A+Aj, -A-Aj, -A-Aj, -A+Aj, A+Aj, -A+Aj, -A-Aj, A+Aj, A+Aj, -A+Aj, A-Aj, -A+Aj, -A-Aj, A-Aj, A-Aj, A-Aj |
| 22 | Polarization 1 | A-Aj, A-Aj, A-Aj, A+Aj, -A+Aj, A+Aj, -A-Aj, -A+Aj, A+Aj, -A+Aj, A+Aj, -A-Aj, A-Aj, -A-Aj, -A-Aj, -A+Aj |
| | Polarization 2 | -A+Aj, A-Aj, A-Aj, -A-Aj, -A+Aj, -A-Aj, A-Aj, -A+Aj, -A+Aj, -A-Aj, A+Aj, -A-Aj, A-Aj, A+Aj, A+Aj, A+Aj |
| 23 | Polarization 1 | -A+Aj, A-Aj, A-Aj, A+Aj, -A+Aj, A+Aj, A-Aj, -A+Aj, -A+Aj, A+Aj, -A-Aj, A+Aj, A-Aj, -A-Aj, -A-Aj, -A-Aj |
| | Polarization 2 | A-Aj, A-Aj, A-Aj, -A-Aj, -A+Aj, -A-Aj, A+Aj, -A+Aj, -A-Aj, -A+Aj, -A-Aj, A+Aj, A-Aj, A+Aj, A+Aj, - A+Aj |
| 24 | Polarization 1 | -A+Aj, A-Aj, A-Aj, A+Aj, -A+Aj, A+Aj, A-Aj, -A+Aj, -A+Aj, A+Aj, -A-Aj, A+Aj, A-Aj, -A-Aj, -A-Aj, -A-Aj |
| | Polarization 2 | -A+Aj, -A+Aj, -A+Aj, A+Aj, A-Aj, A+Aj, -A-Aj, A-Aj, A+Aj, A-Aj, A+Aj, -A-Aj, -A+Aj, -A-Aj, -A-Aj, A-Aj |

(continued)

| Index | Polarization | Training sequence |
|---|---|---|
| 25 | Polarization 1 | -A+Aj, A-Aj, A-Aj, A+Aj, -A+Aj, A+Aj, A-Aj, -A+Aj, -A+Aj, A+Aj, -A-Aj, A+Aj, A-Aj, -A-Aj, -A-Aj, -A-Aj |
| | Polarization 2 | -A-Aj, -A-Aj, -A-Aj, -A+Aj, A+Aj, -A+Aj, A-Aj, A+Aj, -A+Aj, A+Aj, -A+Aj, A-Aj, -A-Aj, A-Aj, A-Aj, A+Aj |
| 26 | Polarization 1 | -A-Aj, A+Aj, A+Aj, A-Aj, -A-Aj, A-Aj, A+Aj, -A-Aj, -A-Aj, A-Aj, -A+Aj, A-Aj, A+Aj, -A+Aj, -A+Aj, - A+Aj |
| | Polarization 2 | A+Aj, A+Aj, A+Aj, -A+Aj, -A-Aj, -A+Aj, A-Aj, -A-Aj, -A+Aj, -A-Aj, -A+Aj, A-Aj, A+Aj, A-Aj, A-Aj, -A-Aj |
| 27 | Polarization 1 | -A-Aj, A+Aj, A+Aj, A-Aj, -A-Aj, A-Aj, A+Aj, -A-Aj, -A-Aj, A-Aj, -A+Aj, A-Aj, A+Aj, -A+Aj, -A+Aj, - A+Aj |
| | Polarization 2 | -A-Aj, -A-Aj, -A-Aj, A-Aj, A+Aj, A-Aj, -A+Aj, A+Aj, A-Aj, A+Aj, A-Aj, -A+Aj, -A-Aj, -A+Aj, -A+Aj, A+Aj |
| 28 | Polarization 1 | -A-Aj, A+Aj, A+Aj, A-Aj, -A-Aj, A-Aj, A+Aj, -A-Aj, -A-Aj, A-Aj, -A+Aj, A-Aj, A+Aj, -A+Aj, -A+Aj, - A+Aj |
| | Polarization 2 | -A+Aj, -A+Aj, -A+Aj, -A-Aj, A-Aj, -A-Aj, A+Aj, A-Aj, -A-Aj, A-Aj, -A-Aj, A+Aj, -A+Aj, A+Aj, A+Aj, A-Aj |
| 29 | Polarization 1 | A+Aj, -A+Aj, -A+Aj, -A-Aj, -A+Aj, A-Aj, A+Aj, A-Aj, A+Aj, -A+Aj, A-Aj, A+Aj, A-Aj, -A-Aj, -A-Aj, -A-Aj |
| | Polarization 2 | A+Aj, A+Aj, A+Aj, A-Aj, -A-Aj, A+Aj, -A-Aj, -A+Aj, -A+Aj, A-Aj, -A-Aj, -A+Aj, -A-Aj, A-Aj, A-Aj, - A+Aj |
| 30 | Polarization 1 | A+Aj, -A+Aj, -A+Aj, -A-Aj, -A+Aj, A-Aj, A+Aj, A-Aj, A+Aj, -A+Aj, A-Aj, A+Aj, A-Aj, -A-Aj, -A-Aj, -A-Aj |
| | Polarization 2 | -A+Aj, -A+Aj, -A+Aj, A+Aj, A-Aj, -A+Aj, A-Aj, -A-Aj, -A-Aj, A+Aj, A-Aj, -A-Aj, A-Aj, A+Aj, A+Aj, -A-Aj |
| 31 | Polarization 1 | A+Aj, -A+Aj, -A+Aj, -A-Aj, -A+Aj, A-Aj, A+Aj, A-Aj, A+Aj, -A+Aj, A-Aj, A+Aj, A-Aj, -A-Aj, -A-Aj, -A-Aj |
| | Polarization 2 | A-Aj, A-Aj, A-Aj, -A-Aj, -A+Aj, A-Aj, -A+Aj, A+Aj, A+Aj, -A-Aj, -A+Aj, A+Aj, -A+Aj, -A-Aj, -A-Aj, A+Aj |
| 32 | Polarization 1 | A+Aj, -A+Aj, -A+Aj, -A-Aj, -A+Aj, A-Aj, A+Aj, A-Aj, A+Aj, -A+Aj, A-Aj, A+Aj, A-Aj, -A-Aj, -A-Aj, -A-Aj |
| | Polarization 2 | -A-Aj, -A-Aj, -A-Aj, -A+Aj, A+Aj, -A-Aj, A+Aj, A-Aj, A-Aj, -A+Aj, A+Aj, A-Aj, A+Aj, -A+Aj, -A+Aj, A-Aj |
| 33 | Polarization 1 | A-Aj, -A-Aj, -A-Aj, -A+Aj, -A-Aj, A+Aj, A-Aj, A+Aj, A-Aj, -A-Aj, A+Aj, A-Aj, A+Aj, -A+Aj, -A+Aj, - A+Aj |
| | Polarization 2 | A-Aj, A-Aj, A-Aj, A+Aj, -A+Aj, A-Aj, -A+Aj, -A-Aj, -A-Aj, A+Aj, -A+Aj, -A-Aj, -A+Aj, A+Aj, A+Aj, -A-Aj |
| 34 | Polarization 1 | A-Aj, -A-Aj, -A-Aj, -A+Aj, -A-Aj, A+Aj, A-Aj, A+Aj, A-Aj, -A-Aj, A+Aj, A-Aj, A+Aj, -A+Aj, -A+Aj, - A+Aj |
| | Polarization 2 | -A-Aj, -A-Aj, -A-Aj, A-Aj, A+Aj, -A-Aj, A+Aj, -A+Aj, -A+Aj, A-Aj, A+Aj, -A+Aj, A+Aj, A-Aj, A-Aj, - A+Aj |
| 35 | Polarization 1 | A-Aj, -A-Aj, -A-Aj, -A+Aj, -A-Aj, A+Aj, A-Aj, A+Aj, A-Aj, -A-Aj, A+Aj, A-Aj, A+Aj, -A+Aj, -A+Aj, - A+Aj |
| | Polarization 2 | A+Aj, A+Aj, A+Aj, -A+Aj, -A-Aj, A+Aj, -A-Aj, A-Aj, A-Aj, -A+Aj, -A-Aj, A-Aj, -A-Aj, -A+Aj, -A+Aj, A-Aj |

(continued)

| Index | Polarization | Training sequence |
|---|---|---|
| 36 | Polarization 1 | A-Aj, -A-Aj, -A-Aj, -A+Aj, -A-Aj, A+Aj, A-Aj, A+Aj, A-Aj, -A-Aj, A+Aj, A-Aj, A+Aj, -A+Aj, -A+Aj, - A+Aj |
|  | Polarization 2 | -A+Aj, -A+Aj, -A+Aj, -A-Aj, A-Aj, -A+Aj, A-Aj, A+Aj, A+Aj, -A-Aj, A-Aj, A+Aj, A-Aj, -A-Aj, -A-Aj, A+Aj |
| 37 | Polarization 1 | A-Aj, A-Aj, A-Aj, A+Aj, -A+Aj, A-Aj, -A+Aj, -A-Aj, -A-Aj, A+Aj, -A+Aj, -A-Aj, -A+Aj, A+Aj, A+Aj, -A-Aj |
|  | Polarization 2 | -A+Aj, A+Aj, A+Aj, A-Aj, A+Aj, -A-Aj, -A+Aj, -A-Aj, -A+Aj, A+Aj, -A-Aj, -A+Aj, -A-Aj, A-Aj, A-Aj, A-Aj |
| 38 | Polarization 1 | A-Aj, A-Aj, A-Aj, A+Aj, -A+Aj, A-Aj, -A+Aj, -A-Aj, -A-Aj, A+Aj, -A+Aj, -A-Aj, -A+Aj, A+Aj, A+Aj, -A-Aj |
|  | Polarization 2 | -A-Aj, -A+Aj, -A+Aj, A+Aj, -A+Aj, A-Aj, -A-Aj, A-Aj, -A-Aj, -A+Aj, A-Aj, -A-Aj, A-Aj, A+Aj, A+Aj, A+Aj |
| 39 | Polarization 1 | A+Aj, A+Aj, A+Aj, A-Aj, -A-Aj, A+Aj, -A-Aj, -A+Aj, -A+Aj, A-Aj, -A-Aj, -A+Aj, -A-Aj, A-Aj, A-Aj, - A+Aj |
|  | Polarization 2 | -A-Aj, A-Aj, A-Aj, A+Aj, A-Aj, -A+Aj, -A-Aj, -A+Aj, -A-Aj, A-Aj, -A+Aj, -A-Aj, -A+Aj, A+Aj, A+Aj, A+Aj |
| 40 | Polarization 1 | A+Aj, A+Aj, A+Aj, A-Aj, -A-Aj, A+Aj, -A-Aj, -A+Aj, -A+Aj, A-Aj, -A-Aj, -A+Aj, -A-Aj, A-Aj, A-Aj, - A+Aj |
|  | Polarization 2 | -A+Aj, -A-Aj, -A-Aj, A-Aj, -A-Aj, A+Aj, -A+Aj, A+Aj, -A+Aj, -A-Aj, A+Aj, -A+Aj, A+Aj, A-Aj, A-Aj, A-Aj |
| 41 | Polarization 1 | -A+Aj, -A+Aj, -A+Aj, A+Aj, A-Aj, -A+Aj, A-Aj, -A-Aj, -A-Aj, A+Aj, A-Aj, -A-Aj, A-Aj, A+Aj, A+Aj, -A-Aj |
|  | Polarization 2 | -A-Aj, A-Aj, A-Aj, A+Aj, A-Aj, -A+Aj, -A-Aj, -A+Aj, -A-Aj, A-Aj, -A+Aj, -A-Aj, -A+Aj, A+Aj, A+Aj, A+Aj |
| 42 | Polarization 1 | -A+Aj, -A+Aj, -A+Aj, A+Aj, A-Aj, -A+Aj, A-Aj, -A-Aj, -A-Aj, A+Aj, A-Aj, -A-Aj, A-Aj, A+Aj, A+Aj, -A-Aj |
|  | Polarization 2 | -A+Aj, -A-Aj, -A-Aj, A-Aj, -A-Aj, A+Aj, -A+Aj, A+Aj, -A+Aj, -A-Aj, A+Aj, -A+Aj, A+Aj, A-Aj, A-Aj, A-Aj |
| 43 | Polarization 1 | -A-Aj, -A-Aj, -A-Aj, A-Aj, A+Aj, -A-Aj, A+Aj, -A+Aj, -A+Aj, A-Aj, A+Aj, -A+Aj, A+Aj, A-Aj, A-Aj, - A+Aj |
|  | Polarization 2 | -A+Aj, A+Aj, A+Aj, A-Aj, A+Aj, -A-Aj, -A+Aj, -A-Aj, -A+Aj, A+Aj, -A-Aj, -A+Aj, -A-Aj, A-Aj, A-Aj, A-Aj |
| 44 | Polarization 1 | -A-Aj, -A-Aj, -A-Aj, A-Aj, A+Aj, -A-Aj, A+Aj, -A+Aj, -A+Aj, A-Aj, A+Aj, -A+Aj, A+Aj, A-Aj, A-Aj, - A+Aj |
|  | Polarization 2 | -A-Aj, -A+Aj, -A+Aj, A+Aj, -A+Aj, A-Aj, -A-Aj, A-Aj, -A-Aj, -A+Aj, A-Aj, -A-Aj, A-Aj, A+Aj, A+Aj, A+Aj |
| 45 | Polarization 1 | A+Aj, A+Aj, A+Aj, -A+Aj, -A-Aj, -A+Aj, A-Aj, -A-Aj, -A+Aj, -A-Aj, -A+Aj, A-Aj, A+Aj, A-Aj, A-Aj, -A-Aj |
|  | Polarization 2 | A+Aj, -A-Aj, -A-Aj, -A+Aj, A+Aj, -A+Aj, -A-Aj, A+Aj, A+Aj, -A+Aj, A-Aj, -A+Aj, -A-Aj, A-Aj, A-Aj, A-Aj |
| 46 | Polarization 1 | A+Aj, A+Aj, A+Aj, -A+Aj, -A-Aj, -A+Aj, A-Aj, -A-Aj, -A+Aj, -A-Aj, -A+Aj, A-Aj, A+Aj, A-Aj, A-Aj, -A-Aj |
|  | Polarization 2 | -A+Aj, A-Aj, A-Aj, -A-Aj, -A+Aj, -A-Aj, A-Aj, -A+Aj, -A+Aj, -A-Aj, A+Aj, -A-Aj, A-Aj, A+Aj, A+Aj, A+Aj |

(continued)

| Index | Polarization | Training sequence |
|---|---|---|
| 47 | Polarization 1 | A-Aj, A-Aj, A-Aj, -A-Aj, -A+Aj, -A-Aj, A+Aj, -A+Aj, -A-Aj, -A+Aj, -A-Aj, A+Aj, A-Aj, A+Aj, A+Aj, - A+Aj |
| | Polarization 2 | A-Aj, -A+Aj, -A+Aj, -A-Aj, A-Aj, -A-Aj, -A+Aj, A-Aj, A-Aj, -A-Aj, A+Aj, -A-Aj, -A+Aj, A+Aj, A+Aj, A+Aj |
| 48 | Polarization 1 | A-Aj, A-Aj, A-Aj, -A-Aj, -A+Aj, -A-Aj, A+Aj, -A+Aj, -A-Aj, -A+Aj, -A-Aj, A+Aj, A-Aj, A+Aj, A+Aj, - A+Aj |
| | Polarization 2 | -A-Aj, A+Aj, A+Aj, -A+Aj, -A-Aj, -A+Aj, A+Aj, -A-Aj, -A-Aj, -A+Aj, A-Aj, -A+Aj, A+Aj, A-Aj, A-Aj, A-Aj |
| 49 | Polarization 1 | -A+Aj, -A+Aj, -A+Aj, A+Aj, A-Aj, A+Aj, -A-Aj, A-Aj, A+Aj, A-Aj, A+Aj, -A-Aj, -A+Aj, -A-Aj, -A-Aj, A-Aj |
| | Polarization 2 | A-Aj, -A+Aj, -A+Aj, -A-Aj, A-Aj, -A-Aj, -A+Aj, A-Aj, A-Aj, -A-Aj, A+Aj, -A-Aj, -A+Aj, A+Aj, A+Aj, A+Aj |
| 50 | Polarization 1 | -A+Aj, -A+Aj, -A+Aj, A+Aj, A-Aj, A+Aj, -A-Aj, A-Aj, A+Aj, A-Aj, A+Aj, -A-Aj, -A+Aj, -A-Aj, -A-Aj, A-Aj |
| | Polarization 2 | -A-Aj, A+Aj, A+Aj, -A+Aj, -A-Aj, -A+Aj, A+Aj, -A-Aj, -A-Aj, -A+Aj, A-Aj, -A+Aj, A+Aj, A-Aj, A-Aj, A-Aj |
| 51 | Polarization 1 | -A-Aj, -A-Aj, -A-Aj, A-Aj, A+Aj, A-Aj, -A+Aj, A+Aj, A-Aj, A+Aj, A-Aj, -A+Aj, -A-Aj, -A+Aj, -A+Aj, A+Aj |
| | Polarization 2 | A+Aj, -A-Aj, -A-Aj, -A+Aj, A+Aj, -A+Aj, -A-Aj, A+Aj, A+Aj, -A+Aj, A-Aj, -A+Aj, -A-Aj, A-Aj, A-Aj, A-Aj |
| 52 | Polarization 1 | -A-Aj, -A-Aj, -A-Aj, A-Aj, A+Aj, A-Aj, -A+Aj, A+Aj, A-Aj, A+Aj, A-Aj, -A+Aj, -A-Aj, -A+Aj, -A+Aj, A+Aj |
| | Polarization 2 | -A+Aj, A-Aj, A-Aj, -A-Aj, -A+Aj, -A-Aj, A-Aj, -A+Aj, -A+Aj, -A-Aj, A+Aj, -A-Aj, A-Aj, A+Aj, A+Aj, A+Aj |
| 53 | Polarization 1 | A+Aj, A+Aj, A+Aj, -A+Aj, -A-Aj, A+Aj, -A-Aj, A-Aj, A-Aj, -A+Aj, -A-Aj, A-Aj, -A-Aj, -A+Aj, -A+Aj, A-Aj |
| | Polarization 2 | -A+Aj, A+Aj, A+Aj, A-Aj, A+Aj, -A-Aj, -A+Aj, -A-Aj, -A+Aj, A+Aj, -A-Aj, -A+Aj, -A-Aj, A-Aj, A-Aj, A-Aj |
| 54 | Polarization 1 | A+Aj, A+Aj, A+Aj, -A+Aj, -A-Aj, A+Aj, -A-Aj, A-Aj, A-Aj, -A+Aj, -A-Aj, A-Aj, -A-Aj, -A+Aj, -A+Aj, A-Aj |
| | Polarization 2 | -A-Aj, -A+Aj, -A+Aj, A+Aj, -A+Aj, A-Aj, -A-Aj, A-Aj, -A-Aj, -A+Aj, A-Aj, -A-Aj, A-Aj, A+Aj, A+Aj, A+Aj |
| 55 | Polarization 1 | A-Aj, A-Aj, A-Aj, -A-Aj, -A+Aj, A-Aj, -A+Aj, A+Aj, A+Aj, -A-Aj, -A+Aj, A+Aj, -A+Aj, -A-Aj, -A-Aj, A+Aj |
| | Polarization 2 | -A-Aj, A-Aj, A-Aj, A+Aj, A-Aj, -A+Aj, -A-Aj, -A+Aj, -A-Aj, A-Aj, -A+Aj, -A-Aj, -A+Aj, A+Aj, A+Aj, A+Aj |
| 56 | Polarization 1 | A-Aj, A-Aj, A-Aj, -A-Aj, -A+Aj, A-Aj, -A+Aj, A+Aj, A+Aj, -A-Aj, -A+Aj, A+Aj, -A+Aj, -A-Aj, -A-Aj, |
| | Polarization 2 | -A+Aj, -A-Aj, -A-Aj, A-Aj, -A-Aj, A+Aj, -A+Aj, A+Aj, -A+Aj, -A-Aj, A+Aj, -A+Aj, A+Aj, A-Aj, A-Aj, A-Aj |
| 57 | Polarization 1 | -A-Aj, -A-Aj, -A-Aj, -A+Aj, A+Aj, -A-Aj, A+Aj, A-Aj, A-Aj, -A+Aj, A+Aj, A-Aj, A+Aj, -A+Aj, -A+Aj, A-Aj |
| | Polarization 2 | -A-Aj, A-Aj, A-Aj, A+Aj, A-Aj, -A+Aj, -A-Aj, -A+Aj, -A-Aj, A-Aj, -A+Aj, -A-Aj, -A+Aj, A+Aj, A+Aj, |

(continued)

| Index | Polarization | Training sequence |
|---|---|---|
| 58 | Polarization 1 | -A-Aj, -A-Aj, -A-Aj, -A+Aj, A+Aj, -A-Aj, A+Aj, A-Aj, A-Aj, -A+Aj, A+Aj, A-Aj, A+Aj, -A+Aj, -A+Aj, A-Aj |
| | Polarization 2 | -A+Aj, -A-Aj, -A-Aj, A-Aj, -A-Aj, A+Aj, -A+Aj, A+Aj, -A+Aj, -A-Aj, A+Aj, -A+Aj, A+Aj, A-Aj, A-Aj, A-Aj |
| 59 | Polarization 1 | -A+Aj, -A+Aj, -A+Aj, -A-Aj, A-Aj, -A+Aj, A-Aj, A+Aj, A+Aj, -A-Aj, A-Aj, A+Aj, A-Aj, -A-Aj, -A-Aj, |
| | Polarization 2 | -A+Aj, A+Aj, A+Aj, A-Aj, A+Aj, -A-Aj, -A+Aj, -A-Aj, -A+Aj, A+Aj, -A-Aj, -A+Aj, -A-Aj, A-Aj, A-Aj, A-Aj |
| 60 | Polarization 1 | -A+Aj, -A+Aj, -A+Aj, -A-Aj, A-Aj, -A+Aj, A-Aj, A+Aj, A+Aj, -A-Aj, A-Aj, A+Aj, A-Aj, -A-Aj, -A-Aj, |
| | Polarization 2 | -A-Aj, -A+Aj, -A+Aj, A+Aj, -A+Aj, A-Aj, -A-Aj, A-Aj, -A-Aj, -A+Aj, A-Aj, -A-Aj, A-Aj, A+Aj, A+Aj, |
| 61 | Polarization 1 | A+Aj, -A-Aj, -A-Aj, -A+Aj, A+Aj, -A+Aj, -A-Aj, A+Aj, A+Aj, -A+Aj, A-Aj, -A+Aj, -A-Aj, A-Aj, A-Aj, A-Aj |
| | Polarization 2 | -A+Aj, -A+Aj, -A+Aj, -A-Aj, A-Aj, -A-Aj, A+Aj, A-Aj, -A-Aj, A-Aj, -A-Aj, A+Aj, -A+Aj, A+Aj, A+Aj, A-Aj |
| 62 | Polarization 1 | A-Aj, -A+Aj, -A+Aj, -A-Aj, A-Aj, -A-Aj, -A+Aj, A-Aj, A-Aj, -A-Aj, A+Aj, -A-Aj, -A+Aj, A+Aj, A+Aj, |
| | Polarization 2 | -A-Aj, -A-Aj, -A-Aj, -A+Aj, A+Aj, -A+Aj, A-Aj, A+Aj, -A+Aj, A+Aj, -A+Aj, A-Aj, -A-Aj, A-Aj, A-Aj, |
| 63 | Polarization 1 | -A+Aj, -A+Aj, -A+Aj, -A-Aj, A-Aj, -A-Aj, A+Aj, A-Aj, -A-Aj, A-Aj, -A-Aj, A+Aj, -A+Aj, A+Aj, A+Aj, A-Aj |
| | Polarization 2 | -A+Aj, A-Aj, A-Aj, -A-Aj, -A+Aj, -A-Aj, A-Aj, -A+Aj, -A+Aj, -A-Aj, A+Aj, -A-Aj, A-Aj, A+Aj, A+Aj, |
| 64 | Polarization 1 | -A-Aj, -A-Aj, -A-Aj, -A+Aj, A+Aj, -A+Aj, A-Aj, A+Aj, -A+Aj, A+Aj, -A+Aj, A-Aj, -A-Aj, A-Aj, A-Aj, A-Aj, |
| | Polarization 2 | -A-Aj, A+Aj, A+Aj, -A+Aj, -A-Aj, -A+Aj, A+Aj, -A-Aj, -A-Aj, -A+Aj, A-Aj, -A+Aj, A+Aj, A-Aj, A-Aj, A-Aj |

(7) When $N_{TS}$ = 18, the training sequence is one item in the following Table 37.

Table 37

| Index | Polarization | Training sequence |
|---|---|---|
| 1 | Polarization 1 | A+Aj, -A-Aj, A-Aj, A+Aj, A-Aj, -A+Aj, -A-Aj, -A+Aj, A+Aj, A+Aj, -A-Aj, A-Aj, A-Aj, -A+Aj, A-Aj, -A+Aj, -A+Aj, -A-Aj |
| | Polarization 2 | -A-Aj, -A-Aj, A+Aj, A+Aj, A-Aj, -A+Aj, A+Aj, A+Aj, A-Aj, -A-Aj, A+Aj, -A+Aj, -A+Aj, A-Aj, -A-Aj, A-Aj, -A+Aj, -A-Aj |
| 2 | Polarization 1 | A+Aj, -A-Aj, A-Aj, A+Aj, A-Aj, -A+Aj, -A-Aj, -A+Aj, A+Aj, A+Aj, -A-Aj, A-Aj, A-Aj, -A+Aj, A-Aj, -A+Aj, -A+Aj, -A-Aj |
| | Polarization 2 | A+Aj, A+Aj, -A-Aj, -A-Aj, -A+Aj, A-Aj, -A-Aj, -A-Aj, -A+Aj, A+Aj, -A-Aj, A-Aj, A-Aj, -A+Aj, A+Aj, -A+Aj, A-Aj, A+Aj |
| 3 | Polarization 1 | A-Aj, -A+Aj, A+Aj, A-Aj, A+Aj, -A-Aj, -A+Aj, -A-Aj, A-Aj, A-Aj, -A+Aj, A+Aj, A+Aj, -A-Aj, A+Aj, -A-Aj, -A-Aj, -A+Aj |
| | Polarization 2 | -A+Aj, -A+Aj, A-Aj, A-Aj, A+Aj, -A-Aj, A-Aj, A-Aj, A+Aj, -A+Aj, A-Aj, -A-Aj, -A-Aj, A+Aj, -A+Aj, A+Aj, -A-Aj, -A+Aj |

(continued)

| Index | Polarization | Training sequence |
|---|---|---|
| 4 | Polarization 1 | A-Aj, -A+Aj, A+Aj, A-Aj, A+Aj, -A-Aj, -A+Aj, -A-Aj, A-Aj, A-Aj, -A+Aj, A+Aj, A+Aj, -A-Aj, A+Aj, -A-Aj, -A-Aj, -A+Aj |
| | Polarization 2 | A-Aj, A-Aj, -A+Aj, -A+Aj, -A-Aj, A+Aj, -A+Aj, -A+Aj, -A-Aj, A-Aj, -A+Aj, A+Aj, A+Aj, -A-Aj, A-Aj, -A-Aj, A+Aj, A-Aj |
| 5 | Polarization 1 | -A+Aj, A-Aj, A+Aj, -A-Aj, A-Aj, -A-Aj, A+Aj, A-Aj, -A-Aj, -A+Aj, A+Aj, A+Aj, A-Aj, -A-Aj, A+Aj, -A+Aj, -A+Aj, -A-Aj |
| | Polarization 2 | A-Aj, A+Aj, -A+Aj, -A+Aj, A-Aj, -A-Aj, A+Aj, A-Aj, A-Aj, -A-Aj, A+Aj, -A-Aj, A+Aj, -A+Aj, -A-Aj, A-Aj, -A+Aj, -A+Aj |
| 6 | Polarization 1 | -A+Aj, A-Aj, A+Aj, -A-Aj, A-Aj, -A-Aj, A+Aj, A-Aj, -A-Aj, -A+Aj, A+Aj, A+Aj, A-Aj, -A-Aj, A+Aj, -A+Aj, -A+Aj, -A-Aj |
| | Polarization 2 | -A+Aj, -A-Aj, A-Aj, A-Aj, -A+Aj, A+Aj, -A-Aj, -A+Aj, -A+Aj, A+Aj, -A-Aj, A+Aj, -A-Aj, A-Aj, A+Aj, -A+Aj, A-Aj, A-Aj |
| 7 | Polarization 1 | -A-Aj, A+Aj, A-Aj, -A+Aj, A+Aj, -A+Aj, A-Aj, A+Aj, -A+Aj, -A-Aj, A-Aj, A-Aj, A+Aj, -A+Aj, A-Aj, -A-Aj, -A-Aj, -A+Aj |
| | Polarization 2 | A+Aj, A-Aj, -A-Aj, -A-Aj, A+Aj, -A+Aj, A-Aj, A+Aj, A+Aj, -A+Aj, A-Aj, -A+Aj, A-Aj, -A-Aj, -A+Aj, A+Aj, -A-Aj, -A-Aj |
| 8 | Polarization 1 | -A-Aj, A+Aj, A-Aj, -A+Aj, A+Aj, -A+Aj, A-Aj, A+Aj, -A+Aj, -A-Aj, A-Aj, A-Aj, A+Aj, -A+Aj, A-Aj, -A-Aj, -A-Aj, -A+Aj |
| | Polarization 2 | -A-Aj, -A+Aj, A+Aj, A+Aj, -A-Aj, A-Aj, -A+Aj, -A-Aj, -A-Aj, A-Aj, -A+Aj, A-Aj, -A+Aj, A+Aj, A-Aj, -A-Aj, A+Aj, A+Aj |
| 9 | Polarization 1 | A+Aj, A-Aj, -A-Aj, -A-Aj, A+Aj, -A+Aj, A-Aj, A+Aj, A+Aj, -A+Aj, A-Aj, -A+Aj, A-Aj, -A-Aj, -A+Aj, A+Aj, -A-Aj, -A-Aj |
| | Polarization 2 | A+Aj, -A-Aj, -A+Aj, A-Aj, -A-Aj, A-Aj, -A+Aj, -A-Aj, A-Aj, A+Aj, -A+Aj, -A+Aj, -A-Aj, A-Aj, -A+Aj, A+Aj, A+Aj, A-Aj |
| 10 | Polarization 1 | A-Aj, A+Aj, -A+Aj, -A+Aj, A-Aj, -A-Aj, A+Aj, A-Aj, A-Aj, -A-Aj, A+Aj, -A-Aj, A+Aj, -A+Aj, -A-Aj, A-Aj, -A+Aj, -A+Aj |
| | Polarization 2 | A-Aj, -A+Aj, -A-Aj, A+Aj, -A+Aj, A+Aj, -A-Aj, -A+Aj, A+Aj, A-Aj, -A-Aj, -A-Aj, -A+Aj, A+Aj, -A-Aj, A-Aj, A-Aj, A+Aj |
| 11 | Polarization 1 | -A-Aj, -A-Aj, A+Aj, A+Aj, A-Aj, -A+Aj, A+Aj, A+Aj, A-Aj, -A-Aj, A+Aj, -A+Aj, -A+Aj, A-Aj, -A-Aj, A-Aj, -A+Aj, -A-Aj |
| | Polarization 2 | -A-Aj, A+Aj, -A+Aj, -A-Aj, -A+Aj, A-Aj, A+Aj, A-Aj, -A-Aj, -A-Aj, A+Aj, -A+Aj, -A+Aj, A-Aj, -A+Aj, A-Aj, A-Aj, A+Aj |
| 12 | Polarization 1 | -A+Aj, -A+Aj, A-Aj, A-Aj, A+Aj, -A-Aj, A-Aj, A-Aj, A+Aj, -A+Aj, A-Aj, -A-Aj, -A-Aj, A+Aj, -A+Aj, A+Aj, -A-Aj, -A+Aj |
| | Polarization 2 | -A+Aj, A-Aj, -A-Aj, -A+Aj, -A-Aj, A+Aj, A-Aj, A+Aj, -A+Aj, -A+Aj, A-Aj, -A-Aj, -A-Aj, A+Aj, -A-Aj, A+Aj, A+Aj, A-Aj |
| 13 | Polarization 1 | A+Aj, -A+Aj, -A-Aj, -A-Aj, A+Aj, A-Aj, -A+Aj, A+Aj, A+Aj, A-Aj, -A+Aj, A-Aj, -A+Aj, -A-Aj, A-Aj, A+Aj, -A-Aj, -A-Aj |
| | Polarization 2 | A+Aj, -A-Aj, A-Aj, -A+Aj, -A-Aj, -A+Aj, A-Aj, -A-Aj, -A+Aj, A+Aj, A-Aj, A-Aj, -A-Aj, -A+Aj, A-Aj, A+Aj, A+Aj, -A+Aj |
| 14 | Polarization 1 | A+Aj, -A+Aj, -A-Aj, -A-Aj, A+Aj, A-Aj, -A+Aj, A+Aj, A+Aj, A-Aj, -A+Aj, A-Aj, -A+Aj, -A-Aj, A-Aj, A+Aj, -A-Aj, -A-Aj |
| | Polarization 2 | -A-Aj, A+Aj, -A+Aj, A-Aj, A+Aj, A-Aj, -A+Aj, A+Aj, A-Aj, -A-Aj, -A+Aj, -A+Aj, A+Aj, A-Aj, -A+Aj, -A-Aj, -A-Aj, A-Aj |

(continued)

| Index | Polarization | Training sequence |
|---|---|---|
| 15 | Polarization 1 | A-Aj, -A-Aj, -A+Aj, -A+Aj, A-Aj, A+Aj, -A-Aj, A-Aj, A-Aj, A+Aj, -A-Aj, A+Aj, -A-Aj, -A+Aj, A+Aj, A-Aj, -A+Aj, -A+Aj |
| | Polarization 2 | A-Aj, -A+Aj, A+Aj, -A-Aj, -A+Aj, -A-Aj, A+Aj, -A+Aj, -A-Aj, A-Aj, A+Aj, A+Aj, -A+Aj, -A-Aj, A+Aj, A-Aj, A-Aj, -A-Aj |
| 16 | Polarization 1 | A-Aj, -A-Aj, -A+Aj, -A+Aj, A-Aj, A+Aj, -A-Aj, A-Aj, A-Aj, A+Aj, -A-Aj, A+Aj, -A-Aj, -A+Aj, A+Aj, A-Aj, -A+Aj, -A+Aj |
| | Polarization 2 | -A+Aj, A-Aj, -A-Aj, A+Aj, A-Aj, A+Aj, -A-Aj, A-Aj, A+Aj, -A+Aj, -A-Aj, -A-Aj, A-Aj, A+Aj, -A-Aj, -A+Aj, -A+Aj, A+Aj |
| 17 | Polarization 1 | A+Aj, A+Aj, -A-Aj, A-Aj, A+Aj, -A+Aj, A-Aj, -A+Aj, A-Aj, -A-Aj, -A-Aj, -A+Aj, A-Aj, -A-Aj, A+Aj, A+Aj, -A+Aj, -A-Aj |
| | Polarization 2 | -A+Aj, -A-Aj, -A-Aj, A-Aj, -A+Aj, A+Aj, -A-Aj, A-Aj, -A-Aj, -A+Aj, A+Aj, A-Aj, -A+Aj, A+Aj, -A+Aj, A-Aj, A+Aj, -A-Aj |
| 18 | Polarization 1 | A+Aj, A+Aj, -A-Aj, A-Aj, A+Aj, -A+Aj, A-Aj, -A+Aj, A-Aj, -A-Aj, -A-Aj, -A+Aj, A-Aj, -A-Aj, A+Aj, A+Aj, -A+Aj, -A-Aj |
| | Polarization 2 | A-Aj, A+Aj, A+Aj, -A+Aj, A-Aj, -A-Aj, -A+Aj, -A+Aj, A+Aj, A-Aj, -A-Aj, -A+Aj, A-Aj, -A-Aj, A-Aj, -A+Aj, -A-Aj, A+Aj |
| 19 | Polarization 1 | A-Aj, A-Aj, -A+Aj, A+Aj, A-Aj, -A-Aj, A+Aj, -A-Aj, A+Aj, -A+Aj, -A+Aj, -A-Aj, A+Aj, -A+Aj, A-Aj, A-Aj, -A-Aj, -A+Aj |
| | Polarization 2 | -A-Aj, -A+Aj, -A+Aj, A+Aj, -A-Aj, A-Aj, A+Aj, A+Aj, -A+Aj, -A-Aj, A-Aj, A+Aj, -A-Aj, A-Aj, -A-Aj, A+Aj, A-Aj, -A+Aj |
| 20 | Polarization 1 | A-Aj, A-Aj, -A+Aj, A+Aj, A-Aj, -A-Aj, A+Aj, -A-Aj, A+Aj, -A+Aj, -A+Aj, -A-Aj, A+Aj, -A+Aj, A-Aj, A-Aj, -A-Aj, -A+Aj |
| | Polarization 2 | A+Aj, A-Aj, A-Aj, -A-Aj, A+Aj, -A+Aj, -A-Aj, -A-Aj, A-Aj, A+Aj, -A+Aj, -A-Aj, A+Aj, -A+Aj, A+Aj, -A-Aj, -A+Aj, A-Aj |
| 21 | Polarization 1 | -A-Aj, A-Aj, -A+Aj, -A-Aj, -A+Aj, A-Aj, A-Aj, A+Aj, -A-Aj, -A+Aj, A+Aj, A+Aj, A-Aj, -A+Aj, A+Aj, A+Aj, -A-Aj, -A-Aj |
| | Polarization 2 | A+Aj, -A+Aj, -A+Aj, A-Aj, -A+Aj, A-Aj, A-Aj, A+Aj, -A-Aj, -A-Aj, -A+Aj, A+Aj, -A+Aj, A-Aj, -A-Aj, A-Aj, A+Aj, -A-Aj |
| 22 | Polarization 1 | -A-Aj, A-Aj, -A+Aj, -A-Aj, -A+Aj, A-Aj, A-Aj, A+Aj, -A-Aj, -A+Aj, A+Aj, A+Aj, A-Aj, -A+Aj, A+Aj, A+Aj, -A-Aj, -A-Aj |
| | Polarization 2 | -A-Aj, A-Aj, A-Aj, -A+Aj, A-Aj, -A+Aj, -A+Aj, -A-Aj, A+Aj, A+Aj, A-Aj, -A-Aj, A-Aj, -A+Aj, A+Aj, -A+Aj, -A-Aj, A+Aj |
| 23 | Polarization 1 | -A+Aj, A+Aj, -A-Aj, -A+Aj, -A-Aj, A+Aj, A+Aj, A-Aj, -A+Aj, -A-Aj, A-Aj, A-Aj, A+Aj, -A-Aj, A-Aj, A-Aj, -A+Aj, -A+Aj |
| | Polarization 2 | A-Aj, -A-Aj, -A-Aj, A+Aj, -A-Aj, A+Aj, A+Aj, A-Aj, -A+Aj, -A+Aj, -A-Aj, A-Aj, -A-Aj, A+Aj, -A+Aj, A+Aj, A-Aj, -A+Aj |
| 24 | Polarization 1 | -A+Aj, A+Aj, -A-Aj, -A+Aj, -A-Aj, A+Aj, A+Aj, A-Aj, -A+Aj, -A-Aj, A-Aj, A-Aj, A+Aj, -A-Aj, A-Aj, A-Aj, -A+Aj, -A+Aj |
| | Polarization 2 | -A+Aj, A+Aj, A+Aj, -A-Aj, A+Aj, -A-Aj, -A-Aj, -A+Aj, A-Aj, A-Aj, A+Aj, -A+Aj, A+Aj, -A-Aj, A-Aj, -A-Aj, -A+Aj, A-Aj |
| 25 | Polarization 1 | -A-Aj, -A+Aj, A-Aj, -A-Aj, A-Aj, -A+Aj, -A+Aj, A+Aj, -A-Aj, A-Aj, A+Aj, A+Aj, -A+Aj, A-Aj, A+Aj, A+Aj, -A-Aj, -A-Aj |
| | Polarization 2 | A+Aj, A-Aj, A-Aj, -A+Aj, A-Aj, -A+Aj, -A+Aj, A+Aj, -A-Aj, -A-Aj, A-Aj, A+Aj, A-Aj, -A+Aj, -A-Aj, -A+Aj, A+Aj, -A-Aj |

(continued)

| Index | Polarization | Training sequence |
|---|---|---|
| 26 | Polarization 1 | -A-Aj, -A+Aj, A-Aj, -A-Aj, A-Aj, -A+Aj, -A+Aj, A+Aj, -A-Aj, A-Aj, A+Aj, A+Aj, -A+Aj, A-Aj, A+Aj, A+Aj, -A-Aj, -A-Aj |
| | Polarization 2 | -A-Aj, -A+Aj, -A+Aj, A-Aj, -A+Aj, A-Aj, A-Aj, -A-Aj, A+Aj, A+Aj, -A+Aj, -A-Aj, -A+Aj, A-Aj, A+Aj, A-Aj, -A-Aj, A+Aj |
| 27 | Polarization 1 | -A+Aj, -A-Aj, A+Aj, -A+Aj, A+Aj, -A-Aj, -A-Aj, A-Aj, -A+Aj, A+Aj, A-Aj, A-Aj, -A-Aj, A+Aj, A-Aj, A-Aj, -A+Aj, -A+Aj |
| | Polarization 2 | A-Aj, A+Aj, A+Aj, -A-Aj, A+Aj, -A-Aj, -A-Aj, A-Aj, -A+Aj, -A+Aj, A+Aj, A-Aj, A+Aj, -A-Aj, -A+Aj, -A-Aj, A-Aj, -A+Aj |
| 28 | Polarization 1 | -A+Aj, -A-Aj, A+Aj, -A+Aj, A+Aj, -A-Aj, -A-Aj, A-Aj, -A+Aj, A+Aj, A-Aj, A-Aj, -A-Aj, A+Aj, A-Aj, A-Aj, -A+Aj, -A+Aj |
| | Polarization 2 | -A+Aj, -A-Aj, -A-Aj, A+Aj, -A-Aj, A+Aj, A+Aj, -A+Aj, A-Aj, A-Aj, -A-Aj, -A+Aj, -A-Aj, A+Aj, A-Aj, A+Aj, -A+Aj, A-Aj |
| 29 | Polarization 1 | A+Aj, A-Aj, A-Aj, -A+Aj, A-Aj, -A+Aj, -A+Aj, A+Aj, -A-Aj, -A-Aj, A-Aj, A+Aj, A-Aj, -A+Aj, -A-Aj, -A+Aj, A+Aj, -A-Aj |
| | Polarization 2 | A+Aj, A-Aj, -A+Aj, A+Aj, -A+Aj, A-Aj, A-Aj, -A-Aj, A+Aj, -A+Aj, -A-Aj, -A-Aj, A-Aj, -A+Aj, -A-Aj, -A-Aj, A+Aj, A+Aj |
| 30 | Polarization 1 | A-Aj, A+Aj, A+Aj, -A-Aj, A+Aj, -A-Aj, -A-Aj, A-Aj, -A+Aj, -A+Aj, A+Aj, A-Aj, A+Aj, -A-Aj, -A+Aj, -A-Aj, A-Aj, -A+Aj |
| | Polarization 2 | A-Aj, A+Aj, -A-Aj, A-Aj, -A-Aj, A+Aj, A+Aj, -A+Aj, A-Aj, -A-Aj, -A+Aj, -A+Aj, A+Aj, -A-Aj, -A+Aj, -A+Aj, A-Aj, A-Aj |
| 31 | Polarization 1 | -A-Aj, -A-Aj, A+Aj, A+Aj, -A+Aj, A-Aj, A+Aj, A+Aj, -A+Aj, -A-Aj, A+Aj, A-Aj, A-Aj, -A+Aj, -A-Aj, -A+Aj, A-Aj, -A-Aj |
| | Polarization 2 | A+Aj, -A-Aj, -A+Aj, A+Aj, -A+Aj, A-Aj, -A-Aj, A-Aj, A+Aj, A+Aj, -A-Aj, -A+Aj, -A+Aj, A-Aj, -A+Aj, A-Aj, A-Aj, -A-Aj |
| 32 | Polarization 1 | -A-Aj, -A-Aj, A+Aj, A+Aj, -A+Aj, A-Aj, A+Aj, A+Aj, -A+Aj, -A-Aj, A+Aj, A-Aj, A-Aj, -A+Aj, -A-Aj, -A+Aj, A-Aj, -A-Aj |
| | Polarization 2 | -A-Aj, A+Aj, A-Aj, -A-Aj, A-Aj, -A+Aj, A+Aj, -A+Aj, -A-Aj, -A-Aj, A+Aj, A-Aj, A-Aj, -A+Aj, A-Aj, -A+Aj, -A+Aj, A+Aj |
| 33 | Polarization 1 | -A+Aj, -A+Aj, A-Aj, A-Aj, -A-Aj, A+Aj, A-Aj, A-Aj, -A-Aj, -A+Aj, A-Aj, A+Aj, A+Aj, -A-Aj, -A+Aj, -A-Aj, A+Aj, -A+Aj |
| | Polarization 2 | A-Aj, -A+Aj, -A-Aj, A-Aj, -A-Aj, A+Aj, -A+Aj, A+Aj, A-Aj, A-Aj, -A+Aj, -A-Aj, -A-Aj, A+Aj, -A-Aj, A+Aj, A+Aj, -A+Aj |
| 34 | Polarization 1 | -A+Aj, -A+Aj, A-Aj, A-Aj, -A-Aj, A+Aj, A-Aj, A-Aj, -A-Aj, -A+Aj, A-Aj, A+Aj, A+Aj, -A-Aj, -A+Aj, -A-Aj, A+Aj, -A+Aj |
| | Polarization 2 | -A+Aj, A-Aj, A+Aj, -A+Aj, A+Aj, -A-Aj, A-Aj, -A-Aj, -A+Aj, -A+Aj, A-Aj, A+Aj, A+Aj, -A-Aj, A+Aj, -A-Aj, -A-Aj, A-Aj |
| 35 | Polarization 1 | A-Aj, -A-Aj, -A-Aj, -A+Aj, A-Aj, A+Aj, -A+Aj, -A+Aj, -A-Aj, A-Aj, A+Aj, -A+Aj, A-Aj, A+Aj, A-Aj, -A+Aj, A+Aj, -A-Aj |
| | Polarization 2 | A+Aj, A+Aj, -A-Aj, -A+Aj, A+Aj, A-Aj, -A+Aj, A-Aj, -A+Aj, -A-Aj, -A-Aj, A-Aj, -A+Aj, -A-Aj, A+Aj, A+Aj, A-Aj, -A-Aj |
| 36 | Polarization 1 | A-Aj, -A-Aj, -A-Aj, -A+Aj, A-Aj, A+Aj, A+Aj, -A+Aj, -A-Aj, A-Aj, A+Aj, A+Aj, A-Aj, A+Aj, A-Aj, -A+Aj, A+Aj, -A-Aj |
| | Polarization 2 | -A-Aj, -A-Aj, A+Aj, A-Aj, -A-Aj, -A+Aj, A-Aj, -A+Aj, A-Aj, A+Aj, A+Aj, -A+Aj, A-Aj, A+Aj, -A-Aj, -A-Aj, -A+Aj, A+Aj |

(continued)

| Index | Polarization | Training sequence |
|---|---|---|
| 37 | Polarization 1 | A+Aj, -A+Aj, -A+Aj, -A-Aj, A+Aj, A-Aj, -A-Aj, -A-Aj, -A+Aj, A+Aj, A-Aj, -A-Aj, A+Aj, A-Aj, A+Aj, -A-Aj, A-Aj, -A+Aj |
| | Polarization 2 | A-Aj, A-Aj, -A+Aj, -A-Aj, A-Aj, A+Aj, -A-Aj, A+Aj, -A-Aj, -A+Aj, -A+Aj, A+Aj, -A-Aj, -A+Aj, A-Aj, A-Aj, A+Aj, -A+Aj |
| 38 | Polarization 1 | A+Aj, -A+Aj, -A+Aj, -A-Aj, A+Aj, A-Aj, -A-Aj, -A-Aj, -A+Aj, A+Aj, A-Aj, -A-Aj, A+Aj, A-Aj, A+Aj, -A-Aj, A-Aj, -A+Aj |
| | Polarization 2 | -A+Aj, -A+Aj, A-Aj, A+Aj, -A+Aj, -A-Aj, A+Aj, -A-Aj, A+Aj, A-Aj, A-Aj, -A-Aj, A+Aj, A-Aj, -A+Aj, -A+Aj, -A-Aj, A-Aj |
| 39 | Polarization 1 | A+Aj, -A-Aj, -A+Aj, A+Aj, -A+Aj, A-Aj, -A-Aj, A-Aj, A+Aj, A+Aj, -A-Aj, -A+Aj, -A+Aj, A-Aj, -A+Aj, A-Aj, A-Aj, -A-Aj |
| | Polarization 2 | A+Aj, A+Aj, -A-Aj, -A-Aj, A-Aj, -A+Aj, -A-Aj, -A-Aj, A-Aj, A+Aj, -A-Aj, -A+Aj, -A+Aj, A-Aj, A+Aj, A-Aj, -A+Aj, A+Aj |
| 40 | Polarization 1 | A-Aj, -A+Aj, -A-Aj, A-Aj, -A-Aj, A+Aj, -A+Aj, A+Aj, A-Aj, A-Aj, -A+Aj, -A-Aj, -A-Aj, A+Aj, -A-Aj, A+Aj, A+Aj, -A+Aj |
| | Polarization 2 | A-Aj, A-Aj, -A+Aj, -A+Aj, A+Aj, -A-Aj, -A+Aj, -A+Aj, A+Aj, A-Aj, -A+Aj, -A-Aj, -A-Aj, A+Aj, A-Aj, A+Aj, -A-Aj, A-Aj |
| 41 | Polarization 1 | A+Aj, -A+Aj, -A+Aj, A-Aj, -A+Aj, A-Aj, A-Aj, A+Aj, -A-Aj, -A-Aj, -A+Aj, A+Aj, -A+Aj, A-Aj, -A-Aj, A-Aj, A+Aj, -A-Aj |
| | Polarization 2 | A+Aj, -A+Aj, A-Aj, A+Aj, A-Aj, -A+Aj, -A+Aj, -A-Aj, A+Aj, A-Aj, -A-Aj, -A-Aj, -A+Aj, A-Aj, -A-Aj, -A-Aj, A+Aj, A+Aj |
| 42 | Polarization 1 | A-Aj, -A-Aj, -A-Aj, A+Aj, -A-Aj, A+Aj, A+Aj, A-Aj, -A+Aj, -A+Aj, -A-Aj, A-Aj, -A-Aj, A+Aj, -A+Aj, A+Aj, A-Aj, -A+Aj |
| | Polarization 2 | A-Aj, -A-Aj, A+Aj, A-Aj, A+Aj, -A-Aj, -A-Aj, -A+Aj, A-Aj, A+Aj, -A+Aj, -A+Aj, -A-Aj, A+Aj, -A+Aj, -A+Aj, A-Aj, A-Aj |
| 43 | Polarization 1 | -A+Aj, -A-Aj, -A-Aj, A-Aj, -A+Aj, A+Aj, A-Aj, A-Aj, -A-Aj, -A+Aj, A+Aj, A-Aj, -A+Aj, A+Aj, -A+Aj, A-Aj, A+Aj, -A-Aj |
| | Polarization 2 | -A-Aj, -A-Aj, A+Aj, -A+Aj, -A-Aj, A-Aj, -A+Aj, A-Aj, -A+Aj, A+Aj, A+Aj, A-Aj, -A+Aj, A+Aj, -A-Aj, -A-Aj, A-Aj, A+Aj |
| 44 | Polarization 1 | -A-Aj, -A+Aj, -A+Aj, A+Aj, -A-Aj, A-Aj, A+Aj, A+Aj, -A+Aj, -A-Aj, A-Aj, A+Aj, -A-Aj, A-Aj, -A-Aj, A+Aj, A-Aj, -A+Aj |
| | Polarization 2 | -A+Aj, -A+Aj, A-Aj, -A-Aj, -A+Aj, A+Aj, -A-Aj, A+Aj, -A-Aj, A-Aj, A-Aj, A+Aj, -A-Aj, A-Aj, -A+Aj, -A+Aj, A+Aj, A-Aj |
| 45 | Polarization 1 | A+Aj, A+Aj, -A-Aj, -A+Aj, A+Aj, A-Aj, -A+Aj, A-Aj, -A+Aj, -A-Aj, -A-Aj, A-Aj, -A+Aj, -A-Aj, A+Aj, A+Aj, A-Aj, -A-Aj |
| | Polarization 2 | -A+Aj, A+Aj, A+Aj, A-Aj, -A+Aj, -A-Aj, A-Aj, A-Aj, A+Aj, -A+Aj, -A-Aj, A-Aj, -A+Aj, -A-Aj, -A+Aj, A-Aj, -A-Aj, A+Aj |
| 46 | Polarization 1 | A-Aj, A-Aj, -A+Aj, -A-Aj, A-Aj, A+Aj, -A-Aj, A+Aj, -A-Aj, -A+Aj, -A+Aj, A+Aj, -A-Aj, -A+Aj, A-Aj, A-Aj, A+Aj, -A+Aj |
| | Polarization 2 | -A-Aj, A-Aj, A-Aj, A+Aj, -A-Aj, -A+Aj, A+Aj, A+Aj, A-Aj, -A-Aj, -A+Aj, A+Aj, -A-Aj, -A+Aj, -A-Aj, A+Aj, -A+Aj, A-Aj |
| 47 | Polarization 1 | A-Aj, -A+Aj, A+Aj, -A-Aj, -A+Aj, -A-Aj, A+Aj, -A+Aj, -A-Aj, A-Aj, A+Aj, A+Aj, -A+Aj, -A-Aj, A+Aj, A-Aj, A-Aj, -A-Aj |
| | Polarization 2 | -A+Aj, A+Aj, A-Aj, A-Aj, -A+Aj, -A-Aj, A+Aj, -A+Aj, -A+Aj, -A-Aj, A+Aj, -A-Aj, A+Aj, A-Aj, -A-Aj, -A+Aj, A-Aj, A-Aj |

(continued)

| Index | Polarization | Training sequence |
|---|---|---|
| 48 | Polarization 1 | A+Aj, -A-Aj, A-Aj, -A+Aj, -A-Aj, -A+Aj, A-Aj, -A-Aj, -A+Aj, A+Aj, A-Aj, A-Aj, -A-Aj, -A+Aj, A-Aj, A+Aj, A+Aj, -A+Aj |
|  | Polarization 2 | -A-Aj, A-Aj, A+Aj, A+Aj, -A-Aj, -A+Aj, A-Aj, -A-Aj, -A-Aj, -A+Aj, A-Aj, -A+Aj, A-Aj, A+Aj, -A+Aj, -A-Aj, A+Aj, A+Aj |
| 49 | Polarization 1 | -A-Aj, A+Aj, -A+Aj, A-Aj, A+Aj, A-Aj, -A+Aj, A+Aj, A-Aj, -A-Aj, -A+Aj, -A+Aj, A+Aj, A-Aj, -A+Aj, -A-Aj, -A-Aj, A-Aj |
|  | Polarization 2 | -A-Aj, A-Aj, A+Aj, A+Aj, -A-Aj, -A+Aj, A-Aj, -A-Aj, -A-Aj, -A+Aj, A-Aj, -A+Aj, A-Aj, A+Aj, -A+Aj, -A-Aj, A+Aj, A+Aj |
| 50 | Polarization 1 | -A+Aj, A-Aj, -A-Aj, A+Aj, A-Aj, A+Aj, -A-Aj, A-Aj, A+Aj, -A+Aj, -A-Aj, -A-Aj, A-Aj, A+Aj, -A-Aj, -A+Aj, -A+Aj, A+Aj |
|  | Polarization 2 | -A+Aj, A+Aj, A-Aj, A-Aj, -A+Aj, -A-Aj, A+Aj, -A+Aj, -A+Aj, -A-Aj, A+Aj, -A-Aj, A+Aj, A-Aj, -A-Aj, -A+Aj, A-Aj, A-Aj |
| 51 | Polarization 1 | -A+Aj, -A+Aj, A-Aj, A+Aj, -A+Aj, -A-Aj, A+Aj, -A-Aj, A+Aj, A-Aj, A-Aj, -A-Aj, A+Aj, A-Aj, -A+Aj, -A+Aj, -A-Aj, A-Aj |
|  | Polarization 2 | -A-Aj, A-Aj, A-Aj, A+Aj, -A-Aj, -A+Aj, A+Aj, A+Aj, A-Aj, -A-Aj, -A+Aj, A+Aj, -A-Aj, -A+Aj, -A-Aj, A+Aj, -A+Aj, A-Aj |
| 52 | Polarization 1 | -A-Aj, -A-Aj, A+Aj, A-Aj, -A-Aj, -A+Aj, A-Aj, -A+Aj, A-Aj, A+Aj, A+Aj, -A+Aj, A-Aj, A+Aj, -A-Aj, -A-Aj, -A+Aj, A+Aj |
|  | Polarization 2 | -A+Aj, A+Aj, A+Aj, A-Aj, -A+Aj, -A-Aj, A-Aj, A-Aj, A+Aj, -A+Aj, -A-Aj, A-Aj, -A+Aj, -A-Aj, -A+Aj, A-Aj, -A-Aj, A+Aj |
| 53 | Polarization 1 | A+Aj, A-Aj, A-Aj, -A-Aj, A+Aj, -A+Aj, -A-Aj, -A-Aj, A-Aj, A+Aj, -A+Aj, -A-Aj, A+Aj, -A+Aj, A+Aj, -A-Aj, -A+Aj, A-Aj |
|  | Polarization 2 | -A+Aj, -A+Aj, A-Aj, -A-Aj, -A+Aj, A+Aj, -A-Aj, A+Aj, -A-Aj, A-Aj, A-Aj, A+Aj, -A-Aj, A-Aj, -A+Aj, -A+Aj, A+Aj, A-Aj |
| 54 | Polarization 1 | A-Aj, A+Aj, A+Aj, -A+Aj, A-Aj, -A-Aj, -A+Aj, -A+Aj, A+Aj, A-Aj, -A-Aj, -A+Aj, A-Aj, -A-Aj, A-Aj, -A+Aj, -A-Aj, A+Aj |
|  | Polarization 2 | -A-Aj, -A-Aj, A+Aj, -A+Aj, -A-Aj, A-Aj, -A+Aj, A-Aj, -A+Aj, A+Aj, A+Aj, A-Aj, -A+Aj, A+Aj, -A-Aj, -A-Aj, A-Aj, A+Aj |
| 55 | Polarization 1 | -A+Aj, A+Aj, A+Aj, -A-Aj, A+Aj, -A-Aj, -A-Aj, -A+Aj, A-Aj, A-Aj, A+Aj, -A+Aj, A+Aj, -A-Aj, A-Aj, -A-Aj, -A+Aj, A-Aj |
|  | Polarization 2 | A-Aj, -A-Aj, A+Aj, A-Aj, A+Aj, -A-Aj, -A-Aj, -A+Aj, A-Aj, A+Aj, -A+Aj, -A+Aj, -A-Aj, A+Aj, -A+Aj, -A+Aj, A-Aj, A-Aj |
| 56 | Polarization 1 | -A-Aj, A-Aj, A-Aj, -A+Aj, A-Aj, -A+Aj, -A+Aj, -A-Aj, A+Aj, A+Aj, A-Aj, -A-Aj, A-Aj, -A+Aj, A+Aj, -A+Aj, -A-Aj, A+Aj |
|  | Polarization 2 | A+Aj, -A+Aj, A-Aj, A+Aj, A-Aj, -A+Aj, -A+Aj, -A-Aj, A+Aj, A-Aj, -A-Aj, -A-Aj, -A+Aj, A-Aj, -A-Aj, -A-Aj, A+Aj, A+Aj |
| 57 | Polarization 1 | -A+Aj, A-Aj, A+Aj, -A+Aj, A+Aj, -A-Aj, A-Aj, -A-Aj, -A+Aj, -A+Aj, A-Aj, A+Aj, A+Aj, -A-Aj, A+Aj, -A-Aj, -A-Aj, A-Aj |
|  | Polarization 2 | A-Aj, A-Aj, -A+Aj, -A+Aj, A+Aj, -A-Aj, -A+Aj, -A+Aj, A+Aj, A-Aj, -A+Aj, -A-Aj, -A-Aj, A+Aj, A-Aj, A+Aj, -A-Aj, A-Aj |
| 58 | Polarization 1 | -A-Aj, A+Aj, A-Aj, -A-Aj, A-Aj, -A+Aj, A+Aj, -A+Aj, -A-Aj, -A-Aj, A+Aj, A-Aj, A-Aj, -A+Aj, A-Aj, -A+Aj, -A+Aj, A+Aj |
|  | Polarization 2 | A+Aj, A+Aj, -A-Aj, -A-Aj, A-Aj, -A+Aj, -A-Aj, -A-Aj, A-Aj, A+Aj, -A-Aj, -A+Aj, -A+Aj, A-Aj, A+Aj, A-Aj, -A+Aj, A+Aj |

(continued)

| Index | Polarization | Training sequence |
|---|---|---|
| 59 | Polarization 1 | -A+Aj, -A-Aj, -A-Aj, A+Aj, -A-Aj, A+Aj, A+Aj, -A+Aj, A-Aj, A-Aj, -A-Aj, -A+Aj, -A-Aj, A+Aj, A-Aj, A+Aj, -A+Aj, A-Aj |
|  | Polarization 2 | A-Aj, A+Aj, -A-Aj, A-Aj, -A-Aj, A+Aj, A+Aj, -A+Aj, A-Aj, -A-Aj, -A+Aj, -A+Aj, A+Aj, -A-Aj, -A+Aj, -A+Aj, A-Aj, A-Aj |
| 60 | Polarization 1 | -A-Aj, -A+Aj, -A+Aj, A-Aj, -A+Aj, A-Aj, A-Aj, -A-Aj, A+Aj, A+Aj, -A+Aj, -A-Aj, -A+Aj, A-Aj, A+Aj, A-Aj, -A-Aj, A+Aj |
|  | Polarization 2 | A+Aj, A-Aj, -A+Aj, A+Aj, -A+Aj, A-Aj, A-Aj, -A-Aj, A+Aj, -A+Aj, -A-Aj, -A-Aj, A-Aj, -A+Aj, -A-Aj, -A-Aj, A+Aj, A+Aj |
| 61 | Polarization 1 | A-Aj, A-Aj, -A+Aj, -A+Aj, -A-Aj, A+Aj, -A+Aj, -A+Aj, -A-Aj, A-Aj, -A+Aj, A+Aj, A+Aj, -A-Aj, A-Aj, -A-Aj, A+Aj, A-Aj |
|  | Polarization 2 | -A+Aj, A-Aj, -A-Aj, -A+Aj, -A-Aj, A+Aj, A-Aj, A+Aj, -A+Aj, -A+Aj, A-Aj, -A-Aj, -A-Aj, A+Aj, -A-Aj, A+Aj, A+Aj, A-Aj |
| 62 | Polarization 1 | A+Aj, A+Aj, -A-Aj, -A-Aj, -A+Aj, A-Aj, -A-Aj, -A-Aj, -A+Aj, A+Aj, -A-Aj, A-Aj, A-Aj, -A+Aj, A+Aj, -A+Aj, A-Aj, A+Aj |
|  | Polarization 2 | -A-Aj, A+Aj, -A+Aj, -A-Aj, -A+Aj, A-Aj, A+Aj, A-Aj, -A-Aj, -A-Aj, A+Aj, -A+Aj, -A+Aj, A-Aj, -A+Aj, A-Aj, A-Aj, A+Aj |
| 63 | Polarization 1 | -A+Aj, -A-Aj, A-Aj, A-Aj, -A+Aj, A+Aj, -A-Aj, -A+Aj, -A+Aj, A+Aj, -A-Aj, A+Aj, -A-Aj, A-Aj, A+Aj, -A+Aj, A-Aj, A-Aj |
|  | Polarization 2 | A-Aj, -A+Aj, -A-Aj, A+Aj, -A+Aj, A+Aj, -A-Aj, -A+Aj, A+Aj, A-Aj, -A-Aj, -A-Aj, -A+Aj, A+Aj, -A-Aj, A-Aj, A-Aj, A+Aj |
| 64 | Polarization 1 | -A-Aj, -A+Aj, A+Aj, A+Aj, -A-Aj, A-Aj, -A+Aj, -A-Aj, -A-Aj, A-Aj, -A+Aj, A-Aj, -A+Aj, A+Aj, A-Aj, -A-Aj, A+Aj, A+Aj |
|  | Polarization 2 | A+Aj, -A-Aj, -A+Aj, A-Aj, -A-Aj, A-Aj, -A+Aj, -A-Aj, A-Aj, A+Aj, -A+Aj, -A+Aj, -A-Aj, A-Aj, -A+Aj, A+Aj, A+Aj, A-Aj |

(8) When $N_{TS} = 7$, the training sequence is one item in the following Table 38.

**Table 38**

| Index | Polarization | Training sequence |
|---|---|---|
| 1 | Polarization 1 | -A-Aj, A-Aj, A+Aj, A-Aj, -A+Aj, -A+Aj, -A-Aj |
|  | Polarization 2 | -A-Aj, -A-Aj, A+Aj, -A-Aj, -A+Aj, A-Aj, A+Aj |
| 2 | Polarization 1 | -A-Aj, A-Aj, A-Aj, A+Aj, -A-Aj, -A+Aj, -A+Aj |
|  | Polarization 2 | -A-Aj, -A+Aj, A+Aj, -A-Aj, A-Aj, A+Aj, -A-Aj |
| 3 | Polarization 1 | -A-Aj, -A+Aj, A-Aj, A-Aj, A+Aj, -A-Aj, -A+Aj |
|  | Polarization 2 | -A-Aj, -A-Aj, A+Aj, -A-Aj, A-Aj, -A+Aj, A+Aj |
| 4 | Polarization 1 | -A-Aj, A-Aj, A+Aj, -A-Aj, -A+Aj, A+Aj, -A-Aj |
|  | Polarization 2 | -A-Aj, -A+Aj, -A+Aj, A+Aj, -A-Aj, A-Aj, A-Aj |
| 5 | Polarization 1 | -A-Aj, -A+Aj, A+Aj, -A+Aj, A-Aj, A-Aj, -A-Aj |
|  | Polarization 2 | -A-Aj, -A-Aj, A+Aj, -A-Aj, A-Aj, -A+Aj, A+Aj |
| 6 | Polarization 1 | -A-Aj, A-Aj, -A+Aj, -A+Aj, A+Aj, -A-Aj, A-Aj |
|  | Polarization 2 | -A-Aj, -A-Aj, A+Aj, -A-Aj, -A+Aj, A-Aj, A+Aj |
| 7 | Polarization 1 | -A-Aj, A-Aj, A+Aj, A+Aj, -A-Aj, -A+Aj, -A-Aj |
|  | Polarization 2 | -A+Aj, A-Aj, -A-Aj, -A+Aj, -A+Aj, A-Aj, A+Aj |

(continued)

| Index | Polarization | Training sequence |
|---|---|---|
| 8 | Polarization 1 | -A-Aj, A-Aj, A+Aj, A-Aj, -A-Aj, -A+Aj, -A+Aj |
| | Polarization 2 | -A+Aj, -A+Aj, A+Aj, -A-Aj, A+Aj, -A-Aj, A-Aj |
| 9 | Polarization 1 | -A-Aj, A+Aj, A-Aj, -A-Aj, A-Aj, -A+Aj, -A+Aj |
| | Polarization 2 | -A+Aj, -A-Aj, A-Aj, -A+Aj, A+Aj, A+Aj, -A-Aj |
| 10 | Polarization 1 | -A-Aj, A-Aj, -A+Aj, A+Aj, A-Aj, -A+Aj, -A-Aj |
| | Polarization 2 | -A+Aj, -A-Aj, -A+Aj, A+Aj, A+Aj, -A-Aj, A-Aj |
| 11 | Polarization 1 | -A-Aj, A+Aj, A-Aj, -A-Aj, -A-Aj, A+Aj, -A+Aj |
| | Polarization 2 | -A+Aj, -A-Aj, A-Aj, A-Aj, -A+Aj, A+Aj, -A+Aj |
| 12 | Polarization 1 | -A-Aj, -A+Aj, A+Aj, A+Aj, -A-Aj, A-Aj, -A-Aj |
| | Polarization 2 | -A+Aj, A-Aj, A+Aj, -A+Aj, -A+Aj, A-Aj, -A-Aj |
| 13 | Polarization 1 | -A-Aj, -A+Aj, A-Aj, A+Aj, -A+Aj, A-Aj, -A-Aj |
| | Polarization 2 | -A+Aj, A+Aj, -A+Aj, -A-Aj, -A-Aj, A+Aj, A-Aj |
| 14 | Polarization 1 | -A-Aj, -A+Aj, A+Aj, -A-Aj, A-Aj, A-Aj, -A+Aj |
| | Polarization 2 | -A+Aj, A-Aj, A+Aj, -A+Aj, A+Aj, -A-Aj, -A-Aj |
| 15 | Polarization 1 | -A-Aj, A-Aj, A+Aj, -A-Aj, -A+Aj, -A+Aj, A-Aj |
| | Polarization 2 | -A+Aj, A-Aj, -A-Aj, -A+Aj, -A-Aj, A+Aj, A+Aj |
| 16 | Polarization 1 | -A-Aj, -A-Aj, A-Aj. -A+Aj, A-Aj, -A+Aj, A+Aj |
| | Polarization 2 | -A+Aj, A+Aj, A-Aj, A+Aj, -A+Aj, -A-Aj, -A-Aj |
| 17 | Polarization 1 | -A-Aj, -A+Aj, -A-Aj, A-Aj, A-Aj, -A+Aj, A+Aj |
| | Polarization 2 | -A+Aj, A+Aj, -A-Aj, A-Aj, A+Aj, -A-Aj, -A+Aj |
| 18 | Polarization 1 | -A-Aj, A+Aj, -A+Aj, -A-Aj, -A+Aj, A-Aj, A-Aj |
| | Polarization 2 | -A+Aj, A+Aj, A-Aj, -A+Aj, -A-Aj, -A-Aj, A+Aj |
| 19 | Polarization 1 | -A-Aj, A+Aj, -A+Aj, -A-Aj, -A-Aj, A+Aj, A-Aj |
| | Polarization 2 | -A+Aj, A+Aj, A-Aj, A-Aj, -A+Aj, -A-Aj, -A+Aj |
| 20 | Polarization 1 | -A-Aj, A-Aj, -A-Aj. -A+Aj, -A+Aj, A-Aj, A+Aj |
| | Polarization 2 | -A+Aj, -A-Aj, A+Aj, A-Aj, -A-Aj, A+Aj, -A+Aj |
| 21 | Polarization 1 | -A-Aj, -A+Aj, A+Aj, -A+Aj, -A-Aj, A-Aj, A-Aj |
| | Polarization 2 | -A+Aj, -A+Aj, -A-Aj, A+Aj, -A-Aj, A+Aj, A-Aj |
| 22 | Polarization 1 | -A-Aj, -A-Aj, -A+Aj, A-Aj, -A+Aj, A-Aj, A+Aj |
| | Polarization 2 | -A+Aj, -A-Aj, A-Aj, -A-Aj, -A+Aj, A+Aj, A+Aj |
| 23 | Polarization 1 | -A-Aj, A-Aj, A+Aj, A+Aj, -A-Aj, -A+Aj, -A-Aj |
| | Polarization 2 | A-Aj, -A+Aj, A+Aj, A-Aj, A-Aj, -A+Aj, -A-Aj |
| 24 | Polarization 1 | -A-Aj, A-Aj, A+Aj, A-Aj, -A-Aj, -A+Aj, -A+Aj |
| | Polarization 2 | A-Aj, A-Aj, -A-Aj, A+Aj, -A-Aj, A+Aj, -A+Aj |
| 25 | Polarization 1 | -A-Aj, A+Aj, A-Aj, -A-Aj, A-Aj, -A+Aj, -A+Aj |
| | Polarization 2 | A-Aj, A+Aj, -A+Aj, A-Aj, -A-Aj, -A-Aj, A+Aj |
| 26 | Polarization 1 | -A-Aj, A-Aj, -A+Aj, A+Aj, A-Aj, -A+Aj, -A-Aj |
| | Polarization 2 | A-Aj, A+Aj, A-Aj, -A-Aj, -A-Aj, A+Aj, -A+Aj |

(continued)

| Index | Polarization | Training sequence |
|---|---|---|
| 27 | Polarization 1 | -A-Aj, A+Aj, A-Aj, -A-Aj, -A-Aj, A+Aj, -A+Aj |
|  | Polarization 2 | A-Aj, A+Aj, -A+Aj, -A+Aj, A-Aj, -A-Aj, A-Aj |
| 28 | Polarization 1 | -A-Aj, -A+Aj, A+Aj, A+Aj, -A-Aj, A-Aj, -A-Aj |
|  | Polarization 2 | A-Aj, -A+Aj, -A-Aj, A-Aj, A-Aj, -A+Aj, A+Aj |
| 29 | Polarization 1 | -A-Aj, -A+Aj, A-Aj, A+Aj, -A+Aj, A-Aj, -A-Aj |
|  | Polarization 2 | A-Aj, -A-Aj, A-Aj, A+Aj, A+Aj, -A-Aj, -A+Aj |
| 30 | Polarization 1 | -A-Aj, -A+Aj, A+Aj, -A-Aj, A-Aj, A-Aj, -A+Aj |
|  | Polarization 2 | A-Aj, -A+Aj, -A-Aj, A-Aj, -A-Aj, A+Aj, A+Aj |
| 31 | Polarization 1 | -A-Aj, A-Aj, A+Aj, -A-Aj, -A+Aj, -A+Aj, A-Aj |
|  | Polarization 2 | A-Aj, -A+Aj, A+Aj, A-Aj, A+Aj, -A-Aj, -A-Aj |
| 32 | Polarization 1 | -A-Aj, -A-Aj, A-Aj. -A+Aj, A-Aj, -A+Aj, A+Aj |
|  | Polarization 2 | A-Aj, -A-Aj, -A+Aj, -A-Aj, A-Aj, A+Aj, A+Aj |
| 33 | Polarization 1 | -A-Aj, -A+Aj, -A-Aj, A-Aj, A-Aj, -A+Aj, A+Aj |
|  | Polarization 2 | A-Aj, -A-Aj, A+Aj. -A+Aj, -A-Aj, A+Aj, A-Aj |
| 34 | Polarization 1 | -A-Aj, A+Aj, -A+Aj, -A-Aj, -A+Aj, A-Aj, A-Aj |
|  | Polarization 2 | A-Aj, -A-Aj, -A+Aj, A-Aj, A+Aj, A+Aj, -A-Aj |
| 35 | Polarization 1 | -A-Aj, A+Aj, -A+Aj, -A-Aj, -A-Aj, A+Aj, A-Aj |
|  | Polarization 2 | A-Aj, -A-Aj, -A+Aj, -A+Aj, A-Aj, A+Aj, A-Aj |
| 36 | Polarization 1 | -A-Aj, A-Aj, -A-Aj. -A+Aj, -A+Aj, A-Aj, A+Aj |
|  | Polarization 2 | A-Aj, A+Aj, -A-Aj, -A+Aj, A+Aj, -A-Aj, A-Aj |
| 37 | Polarization 1 | -A-Aj, -A+Aj, A+Aj, -A+Aj, -A-Aj, A-Aj, A-Aj |
|  | Polarization 2 | A-Aj, A-Aj, A+Aj, -A-Aj, A+Aj, -A-Aj, -A+Aj |
| 38 | Polarization 1 | -A-Aj, -A-Aj, -A+Aj, A-Aj, -A+Aj, A-Aj, A+Aj |
|  | Polarization 2 | A-Aj, A+Aj, -A+Aj, A+Aj, A-Aj, -A-Aj, -A-Aj |
| 39 | Polarization 1 | -A-Aj, A-Aj, A+Aj, A-Aj, -A+Aj, -A+Aj, -A-Aj |
|  | Polarization 2 | A+Aj, A+Aj, -A-Aj, A+Aj, A-Aj, -A+Aj, -A-Aj |
| 40 | Polarization 1 | -A-Aj, A-Aj, A-Aj, A+Aj, -A-Aj, -A+Aj, -A+Aj |
|  | Polarization 2 | A+Aj, A+Aj, A-Aj, -A-Aj, A+Aj, -A+Aj, -A-Aj |
| 41 | Polarization 1 | -A-Aj, A-Aj, A-Aj, A+Aj, -A-Aj, -A+Aj, -A+Aj |
|  | Polarization 2 | A+Aj, A-Aj, -A-Aj, A+Aj, -A+Aj, -A-Aj, A+Aj |
| 42 | Polarization 1 | -A-Aj, -A+Aj, A-Aj, A-Aj, A+Aj, -A-Aj, -A+Aj |
|  | Polarization 2 | A+Aj, A+Aj, -A-Aj, A+Aj, -A+Aj, A-Aj, -A-Aj |
| 43 | Polarization 1 | -A-Aj, A-Aj, A+Aj, -A-Aj, -A+Aj, A+Aj, -A-Aj |
|  | Polarization 2 | A+Aj, A-Aj, A-Aj, -A-Aj, A+Aj, -A+Aj, -A+Aj |
| 44 | Polarization 1 | -A-Aj, -A+Aj, A+Aj, -A+Aj, A-Aj, A-Aj, -A-Aj |
|  | Polarization 2 | A+Aj, A+Aj, -A-Aj, A+Aj, -A+Aj, A-Aj, -A-Aj |
| 45 | Polarization 1 | -A-Aj, -A+Aj, A+Aj, -A-Aj, A-Aj, A+Aj, -A-Aj |
|  | Polarization 2 | A+Aj, -A+Aj, -A+Aj, -A-Aj, A+Aj, A-Aj, A-Aj |

(continued)

| Index | Polarization | Training sequence |
|---|---|---|
| 46 | Polarization 1 | -A-Aj, -A-Aj, A-Aj. A+Aj, -A-Aj, -A+Aj, A+Aj |
| | Polarization 2 | A+Aj, A-Aj, A-Aj, -A-Aj, A+Aj, -A+Aj, -A+Aj |
| 47 | Polarization 1 | -A-Aj, A-Aj, -A+Aj, -A+Aj, A+Aj, -A-Aj, A-Aj |
| | Polarization 2 | A+Aj, A+Aj, -A-Aj, A+Aj, A-Aj, -A+Aj, -A-Aj |
| 48 | Polarization 1 | -A-Aj, -A-Aj, A+Aj, -A-Aj, A-Aj, -A+Aj, A+Aj |
| | Polarization 2 | A+Aj, A-Aj, -A-Aj, A-Aj, -A+Aj, -A+Aj, A+Aj |
| 49 | Polarization 1 | -A-Aj, -A-Aj, A+Aj, -A-Aj, A-Aj, -A+Aj, A+Aj |
| | Polarization 2 | A+Aj, A-Aj, -A+Aj, -A+Aj, -A-Aj, A+Aj, A-Aj |
| 50 | Polarization 1 | -A-Aj, -A-Aj, A+Aj, -A-Aj, -A+Aj, A-Aj, A+Aj |
| | Polarization 2 | A+Aj, -A+Aj, A-Aj, A-Aj, -A-Aj, A+Aj, -A+Aj |
| 51 | Polarization 1 | -A-Aj, -A-Aj, A+Aj, -A-Aj, -A+Aj, A-Aj, A+Aj |
| | Polarization 2 | A+Aj, -A+Aj, -A-Aj, -A+Aj, A-Aj, A-Aj, A+Aj |
| 52 | Polarization 1 | -A-Aj, -A+Aj, -A+Aj, A+Aj, -A-Aj, A-Aj, A-Aj |
| | Polarization 2 | A+Aj, A+Aj, -A+Aj, -A-Aj, A+Aj, A-Aj, -A-Aj |
| 53 | Polarization 1 | -A-Aj, -A+Aj, -A+Aj, A+Aj, -A-Aj, A-Aj, A-Aj |
| | Polarization 2 | A+Aj, -A+Aj, -A-Aj, A+Aj, A-Aj, -A-Aj, A+Aj |
| 54 | Polarization 1 | -A-Aj, -A-Aj, -A+Aj, A+Aj, -A-Aj, A-Aj, A+Aj |
| | Polarization 2 | A+Aj, -A+Aj, -A+Aj, -A-Aj, A+Aj, A-Aj, A-Aj |
| 55 | Polarization 1 | -A+Aj, A+Aj, A+Aj, A-Aj, -A+Aj, -A-Aj, -A-Aj |
| | Polarization 2 | -A+Aj, -A-Aj, A-Aj, -A+Aj, A+Aj, A-Aj, -A+Aj |
| 56 | Polarization 1 | -A+Aj, A+Aj, A+Aj, A-Aj, -A+Aj, -A-Aj, -A-Aj |
| | Polarization 2 | -A+Aj, -A+Aj, -A-Aj, A-Aj, -A+Aj, A+Aj, A-Aj |
| 57 | Polarization 1 | -A+Aj, A+Aj, A-Aj, A+Aj, -A-Aj, -A-Aj, -A+Aj |
| | Polarization 2 | -A+Aj, -A+Aj, A-Aj, -A+Aj, -A-Aj, A+Aj, A-Aj |
| 58 | Polarization 1 | -A+Aj, -A-Aj, A+Aj, A+Aj, A-Aj, -A+Aj, -A-Aj |
| | Polarization 2 | -A+Aj, -A+Aj, A-Aj, -A+Aj, A+Aj, -A-Aj, A-Aj |
| 59 | Polarization 1 | -A+Aj, A+Aj, A-Aj, -A+Aj, -A-Aj, A-Aj, -A+Aj |
| | Polarization 2 | -A+Aj, -A-Aj, -A-Aj, A-Aj, -A+Aj, A+Aj, A+Aj |
| 60 | Polarization 1 | -A+Aj, -A-Aj, A-Aj, -A-Aj, A+Aj, A+Aj, -A+Aj |
| | Polarization 2 | -A+Aj, -A+Aj, A-Aj, -A+Aj, A+Aj, -A-Aj, A-Aj |
| 61 | Polarization 1 | -A+Aj, -A+Aj, A+Aj, A-Aj, -A+Aj, -A-Aj, A-Aj |
| | Polarization 2 | -A+Aj, -A-Aj, -A-Aj, A-Aj, -A+Aj, A+Aj, A+Aj |
| 62 | Polarization 1 | -A+Aj, A+Aj, -A-Aj, -A-Aj, A-Aj, -A+Aj, A+Aj |
| | Polarization 2 | -A+Aj, -A+Aj, A-Aj, -A+Aj, -A-Aj, A+Aj, A-Aj |
| 63 | Polarization 1 | -A+Aj, A+Aj, A+Aj, A-Aj, -A+Aj, -A-Aj, -A-Aj |
| | Polarization 2 | A-Aj, A+Aj, -A+Aj, A-Aj, -A-Aj, -A+Aj, A-Aj |
| 64 | Polarization 1 | -A+Aj, A+Aj, A-Aj, A+Aj, -A-Aj, -A-Aj, -A+Aj |
| | Polarization 2 | A-Aj, A-Aj, -A+Aj, A-Aj, A+Aj, -A-Aj, -A+Aj |

EP 4 531 356 B1

(continued)

| Index | Polarization | Training sequence |
|---|---|---|
| 65 | Polarization 1 | -A+Aj, -A-Aj, A+Aj, A+Aj, A-Aj, -A+Aj, -A-Aj |
| | Polarization 2 | A-Aj, A-Aj, -A+Aj. A-Aj, -A-Aj, A+Aj, -A+Aj |
| 66 | Polarization 1 | -A+Aj, A+Aj, A-Aj, -A+Aj, -A-Aj, A-Aj, -A+Aj |
| | Polarization 2 | A-Aj, A+Aj, A+Aj, -A+Aj, A-Aj, -A-Aj, A-Aj |
| 67 | Polarization 1 | -A+Aj, -A-Aj, A-Aj, -A+Aj, A+Aj, A-Aj, -A+Aj |
| | Polarization 2 | A-Aj, -A-Aj, -A-Aj, -A+Aj, A-Aj, A+Aj, A+Aj |
| 68 | Polarization 1 | -A+Aj, -A-Aj, A-Aj, -A-Aj, A+Aj, A+Aj, -A+Aj |
| | Polarization 2 | A-Aj, A-Aj, -A+Aj. A-Aj, -A-Aj, A+Aj, -A+Aj |
| 69 | Polarization 1 | -A+Aj, A+Aj, -A-Aj, -A-Aj, A-Aj, -A+Aj, A+Aj |
| | Polarization 2 | A-Aj, A-Aj, -A+Aj, A-Aj, A+Aj, -A-Aj, -A+Aj |
| 70 | Polarization 1 | -A+Aj, -A+Aj, A-Aj, -A+Aj, A+Aj, -A-Aj, A-Aj |
| | Polarization 2 | A-Aj, A+Aj, -A+Aj, A+Aj, -A-Aj, -A-Aj, A-Aj |
| 71 | Polarization 1 | -A+Aj, -A+Aj, A-Aj, -A+Aj, A+Aj, -A-Aj, A-Aj |
| | Polarization 2 | A-Aj, A+Aj, -A-Aj, -A-Aj, -A+Aj, A-Aj, A+Aj |
| 72 | Polarization 1 | -A+Aj, -A+Aj, A-Aj, -A+Aj, -A-Aj, A+Aj, A-Aj |
| | Polarization 2 | A-Aj, -A-Aj, A+Aj, A+Aj, -A+Aj, A-Aj, -A-Aj |
| 73 | Polarization 1 | -A+Aj, -A+Aj, A-Aj, -A+Aj, -A-Aj, A+Aj, A-Aj |
| | Polarization 2 | A-Aj, -A-Aj, -A+Aj, -A-Aj, A+Aj, A+Aj, A-Aj |
| 74 | Polarization 1 | -A+Aj, -A-Aj, -A-Aj, A-Aj, -A+Aj, A+Aj, A+Aj |
| | Polarization 2 | A-Aj, -A-Aj, -A+Aj, A-Aj, A+Aj, -A+Aj, A-Aj |
| 75 | Polarization 1 | -A+Aj, A+Aj, A-Aj, A+Aj, -A+Aj, -A-Aj, -A-Aj |
| | Polarization 2 | A+Aj, A+Aj, -A+Aj, A-Aj, -A+Aj, A-Aj, -A-Aj |
| 76 | Polarization 1 | -A+Aj, A+Aj, A-Aj, A-Aj, -A+Aj, -A-Aj, -A+Aj |
| | Polarization 2 | A+Aj, -A-Aj, A-Aj, A+Aj, A+Aj, -A-Aj, -A+Aj |
| 77 | Polarization 1 | -A+Aj, A-Aj, A+Aj, -A+Aj, A+Aj, -A-Aj, -A-Aj |
| | Polarization 2 | A+Aj, A-Aj, -A-Aj, A+Aj, -A+Aj, -A+Aj, A-Aj |
| 78 | Polarization 1 | -A+Aj, A+Aj, -A-Aj, A-Aj, A+Aj, -A-Aj, -A+Aj |
| | Polarization 2 | A+Aj, A-Aj, A+Aj, -A+Aj, -A+Aj, A-Aj, -A-Aj |
| 79 | Polarization 1 | -A+Aj, A-Aj, A+Aj, -A+Aj, -A+Aj, A-Aj, -A-Aj |
| | Polarization 2 | A+Aj, A-Aj, -A-Aj, -A-Aj, A+Aj, -A+Aj, A+Aj |
| 80 | Polarization 1 | -A+Aj, -A-Aj, A+Aj, A-Aj, -A-Aj, A+Aj, -A+Aj |
| | Polarization 2 | A+Aj, -A+Aj, A+Aj, A-Aj, A-Aj, -A+Aj, -A-Aj |
| 81 | Polarization 1 | -A+Aj, -A-Aj, A-Aj, A-Aj, -A+Aj, A+Aj, -A+Aj |
| | Polarization 2 | A+Aj, -A-Aj, -A+Aj, A+Aj, A+Aj, -A-Aj, A-Aj |
| 82 | Polarization 1 | -A+Aj, -A-Aj, A-Aj, -A+Aj, A+Aj, A+Aj, -A-Aj |
| | Polarization 2 | A+Aj, -A-Aj, -A+Aj, A+Aj, -A+Aj, A-Aj, A-Aj |
| 83 | Polarization 1 | -A+Aj, A+Aj, A-Aj, -A+Aj, -A-Aj, -A-Aj, A+Aj |
| | Polarization 2 | A+Aj, -A-Aj, A-Aj. A+Aj, A-Aj, -A+Aj, -A+Aj |

194

(continued)

| Index | Polarization | Training sequence |
|---|---|---|
| 84 | Polarization 1 | -A+Aj, -A+Aj, A+Aj, -A-Aj, A+Aj, -A-Aj, A-Aj |
| | Polarization 2 | A+Aj, -A+Aj, -A-Aj, -A+Aj, A+Aj, A-Aj, A-Aj |
| 85 | Polarization 1 | -A+Aj, -A-Aj, -A+Aj, A+Aj, A+Aj, -A-Aj, A-Aj |
| | Polarization 2 | A+Aj, -A+Aj, A-Aj, -A-Aj, -A+Aj, A-Aj, A+Aj |
| 86 | Polarization 1 | -A+Aj, A+Aj, -A+Aj, -A-Aj, -A-Aj, A+Aj, A-Aj |
| | Polarization 2 | A+Aj, A-Aj, -A+Aj, -A-Aj, A-Aj, -A+Aj, A+Aj |
| 87 | Polarization 1 | -A+Aj, A-Aj, -A-Aj, -A+Aj, -A+Aj, A-Aj, A+Aj |
| | Polarization 2 | A+Aj, -A+Aj, -A-Aj, -A-Aj, A+Aj, A-Aj, A+Aj |
| 88 | Polarization 1 | -A+Aj, A-Aj, -A-Aj, -A+Aj, -A-Aj, A+Aj, A+Aj |
| | Polarization 2 | A+Aj, -A+Aj, -A-Aj, A+Aj, A-Aj, A-Aj, -A+Aj |
| 89 | Polarization 1 | -A+Aj, -A-Aj, A-Aj, -A-Aj, -A+Aj, A+Aj, A+Aj |
| | Polarization 2 | A+Aj, A+Aj, A-Aj, -A+Aj, A-Aj, -A+Aj, -A-Aj |
| 90 | Polarization 1 | -A+Aj, -A+Aj, -A-Aj, A+Aj, -A-Aj, A+Aj, A-Aj |
| | Polarization 2 | A+Aj, A-Aj, -A-Aj, A-Aj, A+Aj, -A+Aj, -A+Aj |
| 91 | Polarization 1 | A-Aj, A+Aj, A+Aj, -A+Aj, A-Aj, -A-Aj, -A-Aj |
| | Polarization 2 | A-Aj, A-Aj, -A-Aj, -A+Aj, A-Aj, A+Aj, -A+Aj |
| 92 | Polarization 1 | A-Aj, A+Aj, A+Aj, -A+Aj, A-Aj, -A-Aj, -A-Aj |
| | Polarization 2 | A-Aj, -A-Aj, -A+Aj, A-Aj, A+Aj, -A+Aj, A-Aj |
| 93 | Polarization 1 | A-Aj, A-Aj, A+Aj, -A+Aj, A-Aj, -A-Aj, -A+Aj |
| | Polarization 2 | A-Aj, -A-Aj, -A-Aj, -A+Aj, A-Aj, A+Aj, A+Aj |
| 94 | Polarization 1 | A-Aj, A-Aj, -A+Aj, A-Aj, A+Aj, -A-Aj, -A+Aj |
| | Polarization 2 | A-Aj, -A-Aj, A+Aj, A+Aj, -A+Aj, A-Aj, -A-Aj |
| 95 | Polarization 1 | A-Aj, A-Aj, -A+Aj, A-Aj, A+Aj, -A-Aj, -A+Aj |
| | Polarization 2 | A-Aj, -A-Aj, -A+Aj, -A-Aj, A+Aj, A+Aj, A-Aj |
| 96 | Polarization 1 | A-Aj, A-Aj, -A+Aj. A-Aj, -A-Aj, A+Aj, -A+Aj |
| | Polarization 2 | A-Aj, A+Aj, -A+Aj, A+Aj, -A-Aj, -A-Aj, A-Aj |
| 97 | Polarization 1 | A-Aj, A-Aj, -A+Aj. A-Aj, -A-Aj, A+Aj, -A+Aj |
| | Polarization 2 | A-Aj, A+Aj, -A-Aj, -A-Aj, -A+Aj, A-Aj, A+Aj |
| 98 | Polarization 1 | A-Aj, A+Aj, -A+Aj, A-Aj, -A-Aj, -A+Aj, A-Aj |
| | Polarization 2 | A-Aj, -A-Aj, -A-Aj, -A+Aj, A-Aj, A+Aj, A+Aj |
| 99 | Polarization 1 | A-Aj, A-Aj, A+Aj, -A-Aj, A+Aj, -A-Aj, -A+Aj |
| | Polarization 2 | A+Aj, A-Aj, -A-Aj, A-Aj, A+Aj, -A+Aj, -A+Aj |
| 100 | Polarization 1 | A-Aj, A+Aj, -A+Aj, A+Aj, A-Aj, -A-Aj, -A-Aj |
| | Polarization 2 | A+Aj, A+Aj, A-Aj, -A+Aj, A-Aj, -A+Aj, -A-Aj |
| 101 | Polarization 1 | A-Aj, -A+Aj, A+Aj, A-Aj, A+Aj, -A-Aj, -A-Aj |
| | Polarization 2 | A+Aj, -A+Aj, -A-Aj, A+Aj, A-Aj, A-Aj, -A+Aj |
| 102 | Polarization 1 | A-Aj, -A+Aj, A+Aj, A-Aj, A-Aj, -A+Aj, -A-Aj |
| | Polarization 2 | A+Aj, -A+Aj, -A-Aj, -A-Aj, A+Aj, A-Aj, A+Aj |

(continued)

| Index | Polarization | Training sequence |
|---|---|---|
| 103 | Polarization 1 | A-Aj, -A-Aj, A-Aj, A+Aj, A+Aj, -A-Aj, -A+Aj |
| | Polarization 2 | A+Aj, A-Aj, -A+Aj, -A-Aj, A-Aj, -A+Aj, A+Aj |
| 104 | Polarization 1 | A-Aj, A+Aj, A-Aj, -A-Aj, -A-Aj, A+Aj, -A+Aj |
| | Polarization 2 | A+Aj, -A+Aj, A-Aj, -A-Aj, -A+Aj, A-Aj, A+Aj |
| 105 | Polarization 1 | A-Aj, A-Aj, -A-Aj, A+Aj, -A-Aj, A+Aj, -A+Aj |
| | Polarization 2 | A+Aj, -A+Aj, -A-Aj, -A+Aj, A+Aj, A-Aj, A-Aj |
| 106 | Polarization 1 | A-Aj, -A-Aj, -A+Aj, A-Aj, A+Aj, A+Aj, -A-Aj |
| | Polarization 2 | A+Aj, -A-Aj, A-Aj. A+Aj, A-Aj, -A+Aj, -A+Aj |
| 107 | Polarization 1 | A-Aj, A+Aj, -A+Aj, A-Aj, -A-Aj, -A-Aj, A+Aj |
| | Polarization 2 | A+Aj, -A-Aj, -A+Aj, A+Aj, -A+Aj, A-Aj, A-Aj |
| 108 | Polarization 1 | A-Aj, A+Aj, -A+Aj, -A+Aj, A-Aj, -A-Aj, A-Aj |
| | Polarization 2 | A+Aj, -A-Aj, -A+Aj, A+Aj, A+Aj, -A-Aj, A-Aj |
| 109 | Polarization 1 | A-Aj, A+Aj, -A-Aj, -A+Aj, A+Aj, -A-Aj, A-Aj |
| | Polarization 2 | A+Aj, -A+Aj, A+Aj, A-Aj, A-Aj, -A+Aj, -A-Aj |
| 110 | Polarization 1 | A-Aj, -A+Aj, -A-Aj, A-Aj, A-Aj, -A+Aj, A+Aj |
| | Polarization 2 | A+Aj, A-Aj, -A-Aj, -A-Aj, A+Aj, -A+Aj, A+Aj |
| 111 | Polarization 1 | A-Aj, -A-Aj, A+Aj. -A+Aj, -A-Aj, A+Aj, A-Aj |
| | Polarization 2 | A+Aj, A-Aj, A+Aj, -A+Aj, -A+Aj, A-Aj, -A-Aj |
| 112 | Polarization 1 | A-Aj, -A+Aj, -A-Aj, A-Aj, -A-Aj, A+Aj, A+Aj |
| | Polarization 2 | A+Aj, A-Aj, -A-Aj, A+Aj, -A+Aj, -A+Aj, A-Aj |
| 113 | Polarization 1 | A-Aj, -A-Aj, -A+Aj, -A+Aj, A-Aj, A+Aj, A-Aj |
| | Polarization 2 | A+Aj, -A-Aj, A-Aj, A+Aj, A+Aj, -A-Aj, -A+Aj |
| 114 | Polarization 1 | A-Aj, -A-Aj, -A+Aj, -A-Aj, A-Aj, A+Aj, A+Aj |
| | Polarization 2 | A+Aj, A+Aj, -A+Aj, A-Aj, -A+Aj, A-Aj, -A-Aj |
| 115 | Polarization 1 | A+Aj, A-Aj, A-Aj, -A-Aj, A+Aj, -A+Aj, -A+Aj |
| | Polarization 2 | A+Aj, -A+Aj, -A-Aj, A+Aj, A-Aj, -A-Aj, A+Aj |
| 116 | Polarization 1 | A+Aj, A+Aj, -A-Aj, A+Aj, A-Aj, -A+Aj, -A-Aj |
| | Polarization 2 | A+Aj, -A+Aj, A-Aj, A-Aj, -A-Aj, A+Aj, -A+Aj |
| 117 | Polarization 1 | A+Aj, A+Aj, -A-Aj, A+Aj, A-Aj, -A+Aj, -A-Aj |
| | Polarization 2 | A+Aj, -A+Aj, -A-Aj, -A+Aj, A-Aj, A-Aj, A+Aj |
| 118 | Polarization 1 | A+Aj, A+Aj, -A-Aj, A+Aj, -A+Aj, A-Aj, -A-Aj |
| | Polarization 2 | A+Aj, A-Aj, -A-Aj, A-Aj, -A+Aj, -A+Aj, A+Aj |
| 119 | Polarization 1 | A+Aj, A+Aj, -A-Aj, A+Aj, -A+Aj, A-Aj, -A-Aj |
| | Polarization 2 | A+Aj, A-Aj, -A+Aj, -A+Aj, -A-Aj, A+Aj, A-Aj |
| 120 | Polarization 1 | A+Aj, A-Aj, -A-Aj, A+Aj, -A+Aj, -A-Aj, A+Aj |
| | Polarization 2 | A+Aj, -A+Aj, -A+Aj, -A-Aj, A+Aj, A-Aj, A-Aj |

(9) When $N_{TS}$ = 9, the training sequence TS is one item in the following Table 39.

**196**

**Table 39**

| Index | Polarization | Training sequence |
|---|---|---|
| 1 | Polarization 1 | -A-Aj, A-Aj, A+Aj, A-Aj, -A-Aj, A+Aj, -A-Aj, -A+Aj, -A+Aj |
| | Polarization 2 | -A-Aj, -A+Aj, -A-Aj, A-Aj, A+Aj, A-Aj, -A+Aj, -A-Aj, A+Aj |
| 2 | Polarization 1 | -A-Aj, A-Aj, -A-Aj, -A+Aj, A+Aj, -A+Aj, A-Aj, -A-Aj, A+Aj |
| | Polarization 2 | -A-Aj, -A+Aj, A+Aj, -A+Aj, -A-Aj, A+Aj, -A-Aj, A-Aj, A-Aj |
| 3 | Polarization 1 | -A-Aj, A-Aj, A+Aj, A-Aj, -A-Aj, A+Aj, -A-Aj, -A+Aj, -A+Aj |
| | Polarization 2 | -A+Aj, A+Aj, -A+Aj, -A-Aj, A-Aj, -A-Aj, A+Aj, -A+Aj, A-Aj |
| 4 | Polarization 1 | -A-Aj, -A+Aj, -A-Aj, A-Aj, A+Aj, A-Aj, -A+Aj, -A-Aj, A+Aj |
| | Polarization 2 | -A+Aj, -A-Aj, A-Aj, -A-Aj, -A+Aj, A-Aj, -A+Aj, A+Aj, A+Aj |
| 5 | Polarization 1 | -A-Aj, A-Aj, -A-Aj, -A+Aj, A+Aj, -A+Aj, A-Aj, -A-Aj, A+Aj |
| | Polarization 2 | -A+Aj, A+Aj, A-Aj, A+Aj, -A+Aj, A-Aj, -A+Aj, -A-Aj, -A-Aj |
| 6 | Polarization 1 | -A-Aj, -A+Aj, A+Aj, -A+Aj, -A-Aj, A+Aj, -A-Aj, A-Aj, A-Aj |
| | Polarization 2 | -A+Aj, -A-Aj, -A+Aj, A+Aj, A-Aj, A+Aj, -A-Aj, -A+Aj, A-Aj |
| 7 | Polarization 1 | -A-Aj, A-Aj, A+Aj, A-Aj, -A-Aj, A+Aj, -A-Aj, -A+Aj, -A+Aj |
| | Polarization 2 | A-Aj, -A-Aj, A-Aj, A+Aj, -A+Aj, A+Aj, -A-Aj, A-Aj, -A+Aj |
| 8 | Polarization 1 | -A-Aj, -A+Aj, -A-Aj, A-Aj, A+Aj, A-Aj, -A+Aj, -A-Aj, A+Aj |
| | Polarization 2 | A-Aj, A+Aj, -A+Aj, A+Aj, A-Aj, -A+Aj, A-Aj, -A-Aj, -A-Aj |
| 9 | Polarization 1 | -A-Aj, A-Aj, -A-Aj, -A+Aj, A+Aj, -A+Aj, A-Aj, -A-Aj, A+Aj |
| | Polarization 2 | A-Aj, -A-Aj, -A+Aj, -A-Aj, A-Aj, -A+Aj, A-Aj, A+Aj, A+Aj |
| 10 | Polarization 1 | -A-Aj, -A+Aj, A+Aj, -A+Aj, -A-Aj, A+Aj, -A-Aj, A-Aj, A-Aj |
| | Polarization 2 | A-Aj, A+Aj, A-Aj, -A-Aj, -A+Aj, -A-Aj, A+Aj, A-Aj, -A+Aj |
| 11 | Polarization 1 | -A-Aj, A-Aj, A+Aj, A-Aj, -A-Aj, A+Aj, -A-Aj, -A+Aj, -A+Aj |
| | Polarization 2 | A+Aj, A-Aj, A+Aj, -A+Aj, -A-Aj, -A+Aj, A-Aj, A+Aj, -A-Aj |
| 12 | Polarization 1 | -A-Aj, -A+Aj, -A-Aj, A-Aj, A+Aj, A-Aj, -A+Aj, -A-Aj, A+Aj |
| | Polarization 2 | A+Aj, -A+Aj, -A-Aj, -A+Aj, A+Aj, -A-Aj, A+Aj, A-Aj, A-Aj |
| 13 | Polarization 1 | -A-Aj, A-Aj, -A-Aj, -A+Aj, A+Aj, -A+Aj, A-Aj, -A-Aj, A+Aj |
| | Polarization 2 | A+Aj, A-Aj, -A-Aj, A-Aj, A+Aj, -A-Aj, A+Aj, -A+Aj, -A+Aj |
| 14 | Polarization 1 | -A-Aj, -A+Aj, A+Aj, -A+Aj, -A-Aj, A+Aj, -A-Aj, A-Aj, A-Aj |
| | Polarization 2 | A+Aj, -A+Aj, A+Aj, A-Aj, -A-Aj, A-Aj, -A+Aj, A+Aj, -A-Aj |
| 15 | Polarization 1 | -A+Aj, A+Aj, A-Aj, A+Aj, -A+Aj, A-Aj, -A+Aj, -A-Aj, -A-Aj |
| | Polarization 2 | -A+Aj, -A-Aj, -A+Aj, A+Aj, A-Aj, A+Aj, -A-Aj, -A+Aj, A-Aj |
| 16 | Polarization 1 | -A+Aj, A+Aj, -A+Aj, -A-Aj, A-Aj, -A-Aj, A+Aj, -A+Aj, A-Aj |
| | Polarization 2 | -A+Aj, -A-Aj, A-Aj, -A-Aj, -A+Aj, A-Aj, -A+Aj, A+Aj, A+Aj |
| 17 | Polarization 1 | -A+Aj, A+Aj, A-Aj, A+Aj, -A+Aj, A-Aj, -A+Aj, -A-Aj, -A-Aj |
| | Polarization 2 | A-Aj, A+Aj, A-Aj, -A-Aj, -A+Aj, -A-Aj, A+Aj, A-Aj, -A+Aj |
| 18 | Polarization 1 | -A+Aj, -A-Aj, -A+Aj, A+Aj, A-Aj, A+Aj, -A-Aj, -A+Aj, A-Aj |
| | Polarization 2 | A-Aj, -A-Aj, -A+Aj, -A-Aj, A-Aj, -A+Aj, A-Aj, A+Aj, A+Aj |
| 19 | Polarization 1 | -A+Aj, A+Aj, -A+Aj, -A-Aj, A-Aj, -A-Aj, A+Aj, -A+Aj, A-Aj |
| | Polarization 2 | A-Aj, A+Aj, -A+Aj, A+Aj, A-Aj, -A+Aj, A-Aj, -A-Aj, -A-Aj |

(continued)

| Index | Polarization | Training sequence |
|---|---|---|
| 20 | Polarization 1 | -A+Aj, -A-Aj, A-Aj, -A-Aj, -A+Aj, A-Aj, -A+Aj, A+Aj, A+Aj |
|  | Polarization 2 | A-Aj, -A-Aj, A-Aj, A+Aj, -A+Aj, A+Aj, -A-Aj, A-Aj, -A+Aj |
| 21 | Polarization 1 | -A+Aj, A+Aj, A-Aj, A+Aj, -A+Aj, A-Aj, -A+Aj, -A-Aj, -A-Aj |
|  | Polarization 2 | A+Aj, -A+Aj, A+Aj, A-Aj, -A-Aj, A-Aj, -A+Aj, A+Aj, -A-Aj |
| 22 | Polarization 1 | -A+Aj, -A-Aj, -A+Aj, A+Aj, A-Aj, A+Aj, -A-Aj, -A+Aj, A-Aj |
|  | Polarization 2 | A+Aj, A-Aj, -A-Aj, A-Aj, A+Aj, -A-Aj, A+Aj, -A+Aj, -A+Aj |
| 23 | Polarization 1 | -A+Aj, A+Aj, -A+Aj, -A-Aj, A-Aj, -A-Aj, A+Aj, -A+Aj, A-Aj |
|  | Polarization 2 | A+Aj, -A+Aj, -A-Aj, -A+Aj, A+Aj, -A-Aj, A+Aj, A-Aj, A-Aj |
| 24 | Polarization 1 | -A+Aj, -A-Aj, A-Aj, -A-Aj, -A+Aj, A-Aj, -A+Aj, A+Aj, A+Aj |
|  | Polarization 2 | A+Aj, A-Aj, A+Aj, -A+Aj, -A-Aj, -A+Aj, A-Aj, A+Aj, -A-Aj |
| 25 | Polarization 1 | A-Aj, A+Aj, -A+Aj, A+Aj, A-Aj, -A+Aj, A-Aj, -A-Aj, -A-Aj |
|  | Polarization 2 | A-Aj, -A-Aj, A-Aj, A+Aj, -A+Aj, A+Aj, -A-Aj, A-Aj, -A+Aj |
| 26 | Polarization 1 | A-Aj, A+Aj, A-Aj, -A-Aj, -A+Aj, -A-Aj, A+Aj, A-Aj, -A+Aj |
|  | Polarization 2 | A-Aj, -A-Aj, -A+Aj, -A-Aj, A-Aj, -A+Aj, A-Aj, A+Aj, A+Aj |
| 27 | Polarization 1 | A-Aj, A+Aj, -A+Aj, A+Aj, A-Aj, -A+Aj, A-Aj, -A-Aj, -A-Aj |
|  | Polarization 2 | A+Aj, A-Aj, A+Aj, -A+Aj, -A-Aj, -A+Aj, A-Aj, A+Aj, -A-Aj |
| 28 | Polarization 1 | A-Aj, -A-Aj, A-Aj, A+Aj, -A+Aj, A+Aj, -A-Aj, A-Aj, -A+Aj |
|  | Polarization 2 | A+Aj, -A+Aj, -A-Aj, -A+Aj, A+Aj, -A-Aj, A+Aj, A-Aj, A-Aj |
| 29 | Polarization 1 | A-Aj, A+Aj, A-Aj, -A-Aj, -A+Aj, -A-Aj, A+Aj, A-Aj, -A+Aj |
|  | Polarization 2 | A+Aj, A-Aj, -A-Aj, A-Aj, A+Aj, -A-Aj, A+Aj, -A+Aj, -A+Aj |
| 30 | Polarization 1 | A-Aj, -A-Aj, -A+Aj, -A-Aj, A-Aj, -A+Aj, A-Aj, A+Aj, A+Aj |
|  | Polarization 2 | A+Aj, -A+Aj, A+Aj, A-Aj, -A-Aj, A-Aj, -A+Aj, A+Aj, -A-Aj |
| 31 | Polarization 1 | A+Aj, A-Aj, -A-Aj, A-Aj, A+Aj, -A-Aj, A+Aj, -A+Aj, -A+Aj |
|  | Polarization 2 | A+Aj, -A+Aj, A+Aj, A-Aj, -A-Aj, A-Aj, -A+Aj, A+Aj, -A-Aj |
| 32 | Polarization 1 | A+Aj, A-Aj, A+Aj, -A+Aj, -A-Aj, -A+Aj, A-Aj, A+Aj, -A-Aj |
|  | Polarization 2 | A+Aj, -A+Aj, -A-Aj, -A+Aj, A+Aj, -A-Aj, A+Aj, A-Aj, A-Aj |

(10) When $N_{TS} = 11$, the training sequence is one item in the following Table 40.

**Table 40**

| Index | Polarization | Training sequence |
|---|---|---|
| 1 | Polarization 1 | -A-Aj, A-Aj, A-Aj, -A+Aj, -A-Aj, A+Aj, A-Aj, -A+Aj, A+Aj, -A+Aj, -A-Aj |
|  | Polarization 2 | -A-Aj, -A-Aj, A+Aj, A+Aj, A-Aj, A+Aj, -A-Aj, -A+Aj, -A-Aj, A-Aj, -A+Aj |
| 2 | Polarization 1 | -A-Aj, -A+Aj, -A+Aj, A-Aj, -A-Aj, A+Aj, -A+Aj, A-Aj, A+Aj, A-Aj, -A-Aj |
|  | Polarization 2 | -A-Aj, -A-Aj, A+Aj, A+Aj, -A+Aj, A+Aj, -A-Aj, A-Aj, -A-Aj, -A+Aj, A-Aj |
| 3 | Polarization 1 | -A-Aj, A-Aj, A+Aj, -A+Aj, A+Aj, A-Aj, A+Aj, -A-Aj, -A+Aj, -A-Aj, -A-Aj |
|  | Polarization 2 | -A+Aj, -A-Aj, -A+Aj, A+Aj, A-Aj, -A+Aj, -A+Aj, A+Aj, -A-Aj, A-Aj, A-Aj |
| 4 | Polarization 1 | -A-Aj, -A+Aj, A+Aj, A-Aj, A+Aj, -A+Aj, A+Aj, -A-Aj, A-Aj, -A-Aj, -A-Aj |
|  | Polarization 2 | -A+Aj, A+Aj, -A+Aj, -A-Aj, A-Aj, -A+Aj, -A+Aj, -A-Aj, A+Aj, A-Aj, A-Aj |

(continued)

| Index | Polarization | Training sequence |
|---|---|---|
| 5 | Polarization 1 | -A-Aj, -A+Aj, -A-Aj, A-Aj, A+Aj, -A-Aj, -A-Aj, A-Aj, -A+Aj, A+Aj, A+Aj |
| | Polarization 2 | -A+Aj, A+Aj, A-Aj, -A-Aj, A-Aj, A+Aj, A-Aj, -A+Aj, -A-Aj, -A+Aj, -A+Aj |
| 6 | Polarization 1 | -A-Aj, A-Aj, -A-Aj, -A+Aj, A+Aj, -A-Aj, -A-Aj, -A+Aj, A-Aj, A+Aj, A+Aj |
| | Polarization 2 | -A+Aj, -A-Aj, A-Aj, A+Aj, A-Aj, -A-Aj, A-Aj, -A+Aj, A+Aj, A+Aj, -A+Aj |
| 7 | Polarization 1 | -A-Aj, A-Aj, A+Aj, -A+Aj, A+Aj, A-Aj, A+Aj, -A-Aj, -A+Aj, -A-Aj, -A-Aj |
| | Polarization 2 | A-Aj, A+Aj, A-Aj, -A-Aj, -A+Aj, A-Aj, A-Aj, -A-Aj, A+Aj, -A+Aj, -A+Aj |
| 8 | Polarization 1 | -A-Aj, -A+Aj, A+Aj, A-Aj, A+Aj, -A+Aj, A+Aj, -A-Aj, A-Aj, -A-Aj, -A-Aj |
| | Polarization 2 | A-Aj, -A-Aj, A-Aj, A+Aj, -A+Aj, A-Aj, A-Aj, A+Aj, -A-Aj, -A+Aj, -A+Aj |
| 9 | Polarization 1 | -A-Aj, -A+Aj, -A-Aj, A-Aj, A+Aj, -A-Aj, -A-Aj, A-Aj, -A+Aj, A+Aj, A+Aj |
| | Polarization 2 | A-Aj, -A-Aj, -A+Aj, A+Aj, -A+Aj, -A-Aj, -A+Aj, A-Aj, A+Aj, A-Aj, A-Aj |
| 10 | Polarization 1 | -A-Aj, A-Aj, -A-Aj, -A+Aj, A+Aj, -A-Aj, -A-Aj, -A+Aj, A-Aj, A+Aj, A+Aj |
| | Polarization 2 | A-Aj, A+Aj, -A+Aj, -A-Aj, -A+Aj, A+Aj, -A+Aj, A-Aj, -A-Aj, A-Aj, A-Aj |
| 11 | Polarization 1 | -A-Aj, A-Aj, A-Aj, -A+Aj, -A-Aj, A+Aj, A-Aj, -A+Aj, A+Aj, -A+Aj, -A-Aj |
| | Polarization 2 | A+Aj, A+Aj, -A-Aj, -A-Aj, -A+Aj, -A-Aj, A+Aj, A-Aj, A+Aj, -A+Aj, A-Aj |
| 12 | Polarization 1 | -A-Aj, -A-Aj, A+Aj, A+Aj, A-Aj, A+Aj, -A-Aj, -A+Aj, -A-Aj, A-Aj, -A+Aj |
| | Polarization 2 | A+Aj, -A+Aj, -A+Aj, A-Aj. A+Aj, -A-Aj, -A+Aj, A-Aj, -A-Aj, A-Aj, A+Aj |
| 13 | Polarization 1 | -A-Aj, -A+Aj, -A+Aj, A-Aj, -A-Aj, A+Aj, -A+Aj, A-Aj, A+Aj, A-Aj, -A-Aj |
| | Polarization 2 | A+Aj, A+Aj, -A-Aj, -A-Aj, A-Aj, -A-Aj, A+Aj, -A+Aj, A+Aj, A-Aj, -A+Aj |
| 14 | Polarization 1 | -A-Aj, -A-Aj, A+Aj, A+Aj, -A+Aj, A+Aj, -A-Aj, A-Aj, -A-Aj, -A+Aj, A-Aj |
| | Polarization 2 | A+Aj, A-Aj, A-Aj, -A+Aj, A+Aj, -A-Aj, A-Aj, -A+Aj, A-Aj, -A+Aj, A+Aj |
| 15 | Polarization 1 | -A+Aj, A+Aj, A+Aj, -A-Aj, -A+Aj, A-Aj, A+Aj, -A-Aj, A-Aj, -A-Aj, -A+Aj |
| | Polarization 2 | -A+Aj, -A+Aj, A-Aj, A-Aj, A+Aj, A-Aj, -A+Aj, -A-Aj, -A+Aj, A+Aj, -A-Aj |
| 16 | Polarization 1 | -A+Aj, -A-Aj, -A-Aj, A+Aj, -A+Aj, A-Aj, -A-Aj, A+Aj, A-Aj, A+Aj, -A+Aj |
| | Polarization 2 | -A+Aj, -A+Aj, A-Aj, A-Aj, -A-Aj, A-Aj, -A+Aj, A+Aj, -A+Aj, -A-Aj, A+Aj |
| 17 | Polarization 1 | -A+Aj, A+Aj, A+Aj, -A-Aj, -A+Aj, A-Aj, A+Aj, -A-Aj, A-Aj, -A-Aj, -A+Aj |
| | Polarization 2 | A-Aj, A-Aj, -A+Aj, -A+Aj, -A-Aj, -A+Aj, A-Aj, A+Aj, A-Aj, -A-Aj, A+Aj |
| 18 | Polarization 1 | -A+Aj, -A+Aj, A-Aj, A-Aj, A+Aj, A-Aj, -A+Aj, -A-Aj, -A+Aj, A+Aj, -A-Aj |
| | Polarization 2 | A-Aj, -A-Aj, -A-Aj, A+Aj, A-Aj, -A+Aj, -A-Aj, A+Aj, -A+Aj, A+Aj, A-Aj |
| 19 | Polarization 1 | -A+Aj, -A-Aj, -A-Aj, A+Aj, -A+Aj, A-Aj, -A-Aj, A+Aj, A-Aj, A+Aj, -A+Aj |
| | Polarization 2 | A-Aj, A-Aj, -A+Aj, -A+Aj, A+Aj, -A+Aj, A-Aj, -A-Aj, A-Aj, A+Aj, -A-Aj |
| 20 | Polarization 1 | -A+Aj, -A+Aj, A-Aj, A-Aj, -A-Aj, A-Aj, -A+Aj, A+Aj, -A+Aj, -A-Aj, A+Aj |
| | Polarization 2 | A-Aj, A+Aj, A+Aj, -A-Aj, A-Aj, -A+Aj, A+Aj, -A-Aj, -A+Aj, -A-Aj, A-Aj |
| 21 | Polarization 1 | -A+Aj, A+Aj, A-Aj, -A-Aj, A-Aj, A+Aj, A-Aj, -A+Aj, -A-Aj, -A+Aj, -A+Aj |
| | Polarization 2 | A+Aj, A-Aj, A+Aj, -A+Aj, -A-Aj, A+Aj, A+Aj, -A+Aj, A-Aj, -A-Aj, -A-Aj |
| 22 | Polarization 1 | -A+Aj, -A-Aj, A-Aj, A+Aj, A-Aj, -A-Aj, A-Aj, -A+Aj, A+Aj, -A+Aj, -A+Aj |
| | Polarization 2 | A+Aj, -A+Aj, A+Aj, A-Aj, -A-Aj, A+Aj, A+Aj, A-Aj, -A+Aj, -A-Aj, -A-Aj |
| 23 | Polarization 1 | -A+Aj, -A-Aj, -A+Aj, A+Aj, A-Aj, -A+Aj, -A+Aj, A+Aj, -A-Aj, A-Aj, A-Aj |
| | Polarization 2 | A+Aj, -A+Aj, -A-Aj, A-Aj, -A-Aj, -A+Aj, -A-Aj, A+Aj, A-Aj, A+Aj, A+Aj |

(continued)

| Index | Polarization | Training sequence |
|---|---|---|
| 24 | Polarization 1 | -A+Aj, A+Aj, -A+Aj, -A-Aj, A-Aj, -A+Aj, -A+Aj, -A-Aj, A+Aj, A-Aj, A-Aj |
| | Polarization 2 | A+Aj, A-Aj, -A-Aj, -A+Aj, -A-Aj, A-Aj, -A-Aj, A+Aj, -A+Aj, A+Aj, A+Aj |
| 25 | Polarization 1 | A-Aj, A-Aj, -A+Aj, -A+Aj, A+Aj, -A+Aj, A-Aj, -A-Aj, A-Aj, A+Aj, -A-Aj |
| | Polarization 2 | A-Aj, A+Aj, A+Aj, -A-Aj, A-Aj, -A+Aj, A+Aj, -A-Aj, -A+Aj, -A-Aj, A-Aj |
| 26 | Polarization 1 | A-Aj, A-Aj, -A+Aj, -A+Aj, -A-Aj, -A+Aj, A-Aj, A+Aj, A-Aj, -A-Aj, A+Aj |
| | Polarization 2 | A-Aj, -A-Aj, -A-Aj, A+Aj, A-Aj, -A+Aj, -A-Aj, A+Aj, -A+Aj, A+Aj, A-Aj |
| 27 | Polarization 1 | A-Aj, -A-Aj, A-Aj, A+Aj, -A+Aj, A-Aj, A-Aj, A+Aj, -A-Aj, -A+Aj, -A+Aj |
| | Polarization 2 | A+Aj, A-Aj, -A-Aj, -A+Aj, -A-Aj, A-Aj, -A-Aj, A+Aj, -A+Aj, A+Aj, A+Aj |
| 28 | Polarization 1 | A-Aj, A+Aj, A-Aj, -A-Aj, -A+Aj, A-Aj, A-Aj, -A-Aj, A+Aj, -A+Aj, -A+Aj |
| | Polarization 2 | A+Aj, -A+Aj, -A-Aj, A-Aj, -A-Aj, -A+Aj, -A-Aj, A+Aj, A-Aj, A+Aj, A+Aj |
| 29 | Polarization 1 | A-Aj, A+Aj, -A+Aj, -A-Aj, -A+Aj, A+Aj, -A+Aj, A-Aj, -A-Aj, A-Aj, A-Aj |
| | Polarization 2 | A+Aj, -A+Aj, A+Aj, A-Aj, -A-Aj, A+Aj, A+Aj, A-Aj, -A+Aj, -A-Aj, -A-Aj |
| 30 | Polarization 1 | A-Aj, -A-Aj, -A+Aj, A+Aj, -A+Aj, -A-Aj, -A+Aj, A-Aj, A+Aj, A-Aj, A-Aj |
| | Polarization 2 | A+Aj, A-Aj, A+Aj, -A+Aj, -A-Aj, A+Aj, A+Aj, -A+Aj, A-Aj, -A-Aj, -A-Aj |
| 31 | Polarization 1 | A+Aj, A+Aj, -A-Aj, -A-Aj, A-Aj, -A-Aj, A+Aj, -A+Aj, A+Aj, A-Aj, -A+Aj |
| | Polarization 2 | A+Aj, A-Aj, A-Aj, -A+Aj, A+Aj, -A-Aj, A-Aj, -A+Aj, -A-Aj, -A+Aj, A+Aj |
| 32 | Polarization 1 | A+Aj, A+Aj, -A-Aj, -A-Aj, -A+Aj, -A-Aj, A+Aj, A-Aj, A+Aj, -A+Aj, A-Aj |
| | Polarization 2 | A+Aj, -A+Aj, -A+Aj, A-Aj. A+Aj, -A-Aj, -A+Aj, A-Aj, -A-Aj, A-Aj, A+Aj |

(11) When $N_{TS}$ = 13, the training sequence is one item in the following Table 41.

**Table 41**

| Index | Polarization | Training sequence |
|---|---|---|
| 1 | Polarization 1 | -A-Aj, -A-Aj, A-Aj, A+Aj, A-Aj, -A-Aj, A+Aj, -A-Aj, -A+Aj, -A+Aj, A-Aj, A+Aj, -A+Aj |
| | Polarization 2 | -A-Aj, A+Aj, -A+Aj, A-Aj, -A-Aj, -A-Aj, -A+Aj, A-Aj, -A+Aj, -A-Aj, A-Aj, A+Aj, A+Aj |
| 2 | Polarization 1 | -A-Aj, A+Aj, A-Aj, -A+Aj, -A-Aj, -A-Aj, A-Aj, -A+Aj, A-Aj, -A-Aj, -A+Aj, A+Aj, A+Aj |
| | Polarization 2 | -A-Aj, -A-Aj, -A+Aj, A+Aj, -A+Aj, -A-Aj, A+Aj, -A-Aj, A-Aj, A-Aj, -A+Aj, A+Aj, A-Aj |
| 3 | Polarization 1 | -A-Aj, -A-Aj, A-Aj, A+Aj, A-Aj, -A-Aj, A+Aj, -A-Aj, -A+Aj, -A+Aj, A-Aj, A+Aj, -A+Aj |
| | Polarization 2 | -A+Aj, A-Aj, A+Aj, -A-Aj, -A+Aj, -A+Aj, A+Aj, -A-Aj, A+Aj, -A+Aj, -A-Aj, A-Aj, A-Aj |
| 4 | Polarization 1 | -A-Aj, A+Aj, A-Aj, -A+Aj, -A-Aj, -A-Aj, A-Aj, -A+Aj, A-Aj, -A-Aj, -A+Aj, A+Aj, A+Aj |
| | Polarization 2 | -A+Aj, -A+Aj, A+Aj, A-Aj, A+Aj, -A+Aj, A-Aj, -A+Aj, -A-Aj, -A-Aj, A+Aj, A-Aj, -A-Aj |
| 5 | Polarization 1 | -A-Aj, -A-Aj, -A+Aj, A+Aj, -A+Aj, -A-Aj, A+Aj, -A-Aj, A-Aj, A-Aj, -A+Aj, A+Aj, A-Aj |
| | Polarization 2 | -A+Aj, A-Aj, -A-Aj, A+Aj, -A+Aj, -A+Aj, -A-Aj, A+Aj, -A-Aj, -A+Aj, A+Aj, A-Aj, A-Aj |
| 6 | Polarization 1 | -A-Aj, A+Aj, -A+Aj, A-Aj, -A-Aj, -A-Aj, -A+Aj, A-Aj, -A+Aj, -A-Aj, A-Aj, A+Aj, A+Aj |
| | Polarization 2 | -A+Aj, -A+Aj, -A-Aj, A-Aj, -A-Aj, -A+Aj, A-Aj, -A+Aj, A+Aj, A+Aj, -A-Aj, A-Aj, A+Aj |
| 7 | Polarization 1 | -A-Aj, -A-Aj, A-Aj, A+Aj, A-Aj, -A-Aj, A+Aj, -A-Aj, -A+Aj, -A+Aj, A-Aj, A+Aj, -A+Aj |
| | Polarization 2 | A-Aj, -A+Aj, -A-Aj, A+Aj, A-Aj, A-Aj, -A-Aj, A+Aj, -A-Aj, A-Aj, A+Aj, -A+Aj, -A+Aj |
| 8 | Polarization 1 | -A-Aj, A+Aj, A-Aj, -A+Aj, -A-Aj, -A-Aj, A-Aj, -A+Aj, A-Aj, -A-Aj, -A+Aj, A+Aj, A+Aj |
| | Polarization 2 | A-Aj, A-Aj, -A-Aj, -A+Aj, -A-Aj, A-Aj, -A+Aj, A-Aj, A+Aj, A+Aj, -A-Aj, -A+Aj, A+Aj |

(continued)

| Index | Polarization | Training sequence |
|---|---|---|
| 9 | Polarization 1 | -A-Aj, -A-Aj, -A+Aj, A+Aj, -A+Aj, -A-Aj, A+Aj, -A-Aj, A-Aj, A-Aj, -A+Aj, A+Aj, A-Aj |
| | Polarization 2 | A-Aj, -A+Aj, A+Aj, -A-Aj, A-Aj, A-Aj, A+Aj, -A-Aj, A+Aj, A-Aj, -A-Aj, -A+Aj, -A+Aj |
| 10 | Polarization 1 | -A-Aj, A+Aj, -A+Aj, A-Aj, -A-Aj, -A-Aj, -A+Aj, A-Aj, -A+Aj, -A-Aj, A-Aj, A+Aj, A+Aj |
| | Polarization 2 | A-Aj, A-Aj, A+Aj, -A+Aj, A+Aj, A-Aj, -A+Aj, A-Aj, -A-Aj, -A-Aj, A+Aj, -A+Aj, -A-Aj |
| 11 | Polarization 1 | -A-Aj, -A-Aj, A-Aj, A+Aj, A-Aj, -A-Aj, A+Aj, -A-Aj, -A+Aj, -A+Aj, A-Aj, A+Aj, -A+Aj |
| | Polarization 2 | A+Aj, -A-Aj, A-Aj, -A+Aj, A+Aj, A+Aj, A-Aj, -A+Aj, A-Aj, A+Aj, -A+Aj, -A-Aj, -A-Aj |
| 12 | Polarization 1 | -A-Aj, A+Aj, A-Aj, -A+Aj, -A-Aj, -A-Aj, A-Aj, -A+Aj, A-Aj, -A-Aj, -A+Aj, A+Aj, A+Aj |
| | Polarization 2 | A+Aj, A+Aj, A-Aj, -A-Aj, A-Aj, A+Aj, -A-Aj, A+Aj, -A+Aj, -A+Aj, A-Aj, -A-Aj, -A+Aj |
| 13 | Polarization 1 | -A-Aj, -A-Aj, -A+Aj, A+Aj, -A+Aj, -A-Aj, A+Aj, -A-Aj, A-Aj, A-Aj, -A+Aj, A+Aj, A-Aj |
| | Polarization 2 | A+Aj, -A-Aj, -A+Aj, A-Aj, A+Aj, A+Aj, -A+Aj, A-Aj, -A+Aj, A+Aj, A-Aj, -A-Aj, -A-Aj |
| 14 | Polarization 1 | -A-Aj, A+Aj, -A+Aj, A-Aj, -A-Aj, -A-Aj, -A+Aj, A-Aj, -A+Aj, -A-Aj, A-Aj, A+Aj, A+Aj |
| | Polarization 2 | A+Aj, A+Aj, -A+Aj, -A-Aj, -A+Aj, A+Aj, -A-Aj, A+Aj, A-Aj, A-Aj, -A+Aj, -A-Aj, A-Aj |
| 15 | Polarization 1 | -A+Aj, -A+Aj, A+Aj, A-Aj, A+Aj, -A+Aj, A-Aj, -A+Aj, -A-Aj, -A-Aj, A+Aj, A-Aj, -A-Aj |
| | Polarization 2 | -A+Aj, A-Aj, -A-Aj, A+Aj, -A+Aj, -A+Aj, -A-Aj, A+Aj, -A-Aj, -A+Aj, A+Aj, A-Aj, A-Aj |
| 16 | Polarization 1 | -A+Aj, A-Aj, A+Aj, -A-Aj, -A+Aj, -A+Aj, A+Aj, -A-Aj, A+Aj, -A+Aj, -A-Aj, A-Aj, A-Aj |
| | Polarization 2 | -A+Aj, -A+Aj, -A-Aj, A-Aj, -A-Aj, -A+Aj, A-Aj, -A+Aj, A+Aj, A+Aj, -A-Aj, A-Aj, A+Aj |
| 17 | Polarization 1 | -A+Aj, -A+Aj, A+Aj, A-Aj, A+Aj, -A+Aj, A-Aj, -A+Aj, -A-Aj, -A-Aj, A+Aj, A-Aj, -A-Aj |
| | Polarization 2 | A-Aj, -A+Aj, A+Aj, -A-Aj, A-Aj, A-Aj, A+Aj, -A-Aj, A+Aj, A-Aj, -A-Aj, -A+Aj, -A+Aj |
| 18 | Polarization 1 | -A+Aj, A-Aj, A+Aj, -A-Aj, -A+Aj, -A+Aj, A+Aj, -A-Aj, A+Aj, -A+Aj, -A-Aj, A-Aj, A-Aj |
| | Polarization 2 | A-Aj, A-Aj, A+Aj, -A+Aj, A+Aj, A-Aj, -A+Aj, A-Aj, -A-Aj, -A-Aj, A+Aj, -A+Aj, -A-Aj |
| 19 | Polarization 1 | -A+Aj, -A+Aj, -A-Aj, A-Aj, -A-Aj, -A+Aj, A-Aj, -A+Aj, A+Aj, A+Aj, -A-Aj, A-Aj, A+Aj |
| | Polarization 2 | A-Aj, -A+Aj, -A-Aj, A+Aj, A-Aj, A-Aj, -A-Aj, A+Aj, -A-Aj, A-Aj, A+Aj, -A+Aj, -A+Aj |
| 20 | Polarization 1 | -A+Aj, A-Aj, -A-Aj, A+Aj, -A+Aj, -A+Aj, -A-Aj, A+Aj, -A-Aj, -A+Aj, A+Aj, A-Aj, A-Aj |
| | Polarization 2 | A-Aj, A-Aj, -A-Aj, -A+Aj, -A-Aj, A-Aj, -A+Aj, A-Aj, A+Aj, A+Aj, -A-Aj, -A+Aj, A+Aj |
| 21 | Polarization 1 | -A+Aj, -A+Aj, A+Aj, A-Aj, A+Aj, -A+Aj, A-Aj, -A+Aj, -A-Aj, -A-Aj, A+Aj, A-Aj, -A-Aj |
| | Polarization 2 | A+Aj, -A-Aj, -A+Aj, A-Aj, A+Aj, A+Aj, -A+Aj, A-Aj, -A+Aj, A+Aj, A-Aj, -A-Aj, -A-Aj |
| 22 | Polarization 1 | -A+Aj, A-Aj, A+Aj, -A-Aj, -A+Aj, -A+Aj, A+Aj, -A-Aj, A+Aj, -A+Aj, -A-Aj, A-Aj, A-Aj |
| | Polarization 2 | A+Aj, A+Aj, -A+Aj, -A-Aj, -A+Aj, A+Aj, -A-Aj, A+Aj, A-Aj, A-Aj, -A+Aj, -A-Aj, A-Aj |
| 23 | Polarization 1 | -A+Aj, -A+Aj, -A-Aj, A-Aj, -A-Aj, -A+Aj, A-Aj, -A+Aj, A+Aj, A+Aj, -A-Aj, A-Aj, A+Aj |
| | Polarization 2 | A+Aj, -A-Aj, A-Aj, -A+Aj, A+Aj, A+Aj, A-Aj, -A+Aj, A-Aj, A+Aj, -A+Aj, -A-Aj, -A-Aj |
| 24 | Polarization 1 | -A+Aj, A-Aj, -A-Aj, A+Aj, -A+Aj, -A+Aj, -A-Aj, A+Aj, -A-Aj, -A+Aj, A+Aj, A-Aj, A-Aj |
| | Polarization 2 | A+Aj, A+Aj, A-Aj, -A-Aj, A-Aj, A+Aj, -A-Aj, A+Aj, -A+Aj, -A+Aj, A-Aj, -A-Aj, -A+Aj |
| 25 | Polarization 1 | A-Aj, -A+Aj, A+Aj, -A-Aj, A-Aj, A-Aj, A+Aj, -A-Aj, A+Aj, A-Aj, -A-Aj, -A+Aj, -A+Aj |
| | Polarization 2 | A-Aj, A-Aj, -A-Aj, -A+Aj, -A-Aj, A-Aj, -A+Aj, A-Aj, A+Aj, A+Aj, -A-Aj, -A+Aj, A+Aj |
| 26 | Polarization 1 | A-Aj, A-Aj, A+Aj, -A+Aj, A+Aj, A-Aj, -A+Aj, A-Aj, -A-Aj, -A-Aj, A+Aj, -A+Aj, -A-Aj |
| | Polarization 2 | A-Aj, -A+Aj, -A-Aj, A+Aj, A-Aj, A-Aj, -A-Aj, A+Aj, -A-Aj, A-Aj, A+Aj, -A+Aj, -A+Aj |
| 27 | Polarization 1 | A-Aj, -A+Aj, A+Aj, -A-Aj, A-Aj, A-Aj, A+Aj, -A-Aj, A+Aj, A-Aj, -A-Aj, -A+Aj, -A+Aj |
| | Polarization 2 | A+Aj, A+Aj, A-Aj, -A-Aj, A-Aj. A+Aj, -A-Aj, A+Aj, -A+Aj, -A+Aj, A-Aj, -A-Aj, -A+Aj |

(continued)

| Index | Polarization | Training sequence |
|---|---|---|
| 28 | Polarization 1 | A-Aj, A-Aj, A+Aj, -A+Aj, A+Aj, A-Aj, -A+Aj, A-Aj, -A-Aj, -A-Aj, A+Aj, -A+Aj, -A-Aj |
| | Polarization 2 | A+Aj, -A-Aj, A-Aj, -A+Aj, A+Aj, A+Aj, A-Aj, -A+Aj, A-Aj, A+Aj, -A+Aj, -A-Aj, -A-Aj |
| 29 | Polarization 1 | A-Aj, -A+Aj, -A-Aj, A+Aj, A-Aj, A-Aj, -A-Aj, A+Aj, -A-Aj, A-Aj, A+Aj, -A+Aj, -A+Aj |
| | Polarization 2 | A+Aj, A+Aj, -A+Aj, -A-Aj, -A+Aj, A+Aj, -A-Aj, A+Aj, A-Aj, A-Aj, -A+Aj, -A-Aj, A-Aj |
| 30 | Polarization 1 | A-Aj, A-Aj, -A-Aj, -A+Aj, -A-Aj, A-Aj, -A+Aj, A-Aj, A+Aj, A+Aj, -A-Aj, -A+Aj, A+Aj |
| | Polarization 2 | A+Aj, -A-Aj, -A+Aj, A-Aj, A+Aj, A+Aj, -A+Aj, A-Aj, -A+Aj, A+Aj, A-Aj, -A-Aj, -A-Aj |
| 31 | Polarization 1 | A+Aj, -A-Aj, A-Aj, -A+Aj, A+Aj, A+Aj, A-Aj, -A+Aj, A-Aj, A+Aj, -A+Aj, -A-Aj, -A-Aj |
| | Polarization 2 | A+Aj, A+Aj, -A+Aj, -A-Aj, -A+Aj, A+Aj, -A-Aj, A+Aj, A-Aj, A-Aj, -A+Aj, -A-Aj, A-Aj |
| 32 | Polarization 1 | A+Aj, A+Aj, A-Aj, -A-Aj, A-Aj. A+Aj, -A-Aj, A+Aj, -A+Aj, -A+Aj, A-Aj, -A-Aj, -A+Aj |
| | Polarization 2 | A+Aj, -A-Aj, -A+Aj, A-Aj, A+Aj, A+Aj, -A+Aj, A-Aj, -A+Aj, A+Aj, A-Aj, -A-Aj, -A-Aj |

(12) When $N_{TS}$ = 15, the training sequence is one item in the following Table 42.

**Table 42**

| Index | Polarization | Training sequence |
|---|---|---|
| 1 | Polarization 1 | -A-Aj, -A-Aj, A+Aj, -A+Aj, A+Aj, A-Aj, -A+Aj, A-Aj, -A-Aj, A-Aj, A+Aj, A-Aj, -A-Aj, -A+Aj, -A+Aj |
| | Polarization 2 | -A-Aj, -A+Aj, -A-Aj, A+Aj, A-Aj, A+Aj, -A+Aj, -A-Aj, -A-Aj, A+Aj, -A+Aj, -A-Aj, A+Aj, A-Aj, A-Aj |
| 2 | Polarization 1 | -A-Aj, A-Aj, -A-Aj, A+Aj, -A+Aj, A+Aj, A-Aj, -A-Aj, -A-Aj, A+Aj, A-Aj, -A-Aj, A+Aj, -A+Aj, -A+Aj |
| | Polarization 2 | -A-Aj, -A-Aj, A+Aj, A-Aj, A+Aj, -A+Aj, A-Aj, -A+Aj, -A-Aj, -A+Aj, A+Aj, -A+Aj, -A-Aj, A-Aj, A-Aj |
| 3 | Polarization 1 | -A-Aj, -A-Aj, A-Aj, -A+Aj, A+Aj, -A+Aj, -A-Aj, A+Aj, A+Aj, -A-Aj, A+Aj, A-Aj, -A-Aj, A-Aj, -A+Aj |
| | Polarization 2 | -A-Aj, -A-Aj, -A+Aj, A-Aj, -A+Aj, -A-Aj, A+Aj, A-Aj, A-Aj, -A-Aj, A+Aj, -A+Aj, -A+Aj, A-Aj, A+Aj |
| 4 | Polarization 1 | -A-Aj, -A-Aj, -A+Aj, A-Aj, A+Aj, A-Aj, -A-Aj, A+Aj, A+Aj, -A-Aj, A+Aj, -A+Aj, -A-Aj, -A+Aj, A-Aj |
| | Polarization 2 | -A-Aj, -A-Aj, A-Aj, -A+Aj, A-Aj, -A-Aj, A+Aj, -A+Aj, -A+Aj, -A-Aj, A+Aj, A-Aj, A-Aj, -A+Aj, A+Aj |
| 5 | Polarization 1 | -A-Aj, A+Aj, -A+Aj, -A+Aj, A-Aj, -A-Aj, A+Aj, A-Aj, A+Aj, -A-Aj, A-Aj, A+Aj, -A-Aj, -A-Aj, -A+Aj |
| | Polarization 2 | -A+Aj, -A+Aj, -A-Aj, A+Aj, A-Aj, -A-Aj, -A-Aj, -A+Aj, A-Aj, -A+Aj, A-Aj, A+Aj, -A+Aj, A+Aj, A-Aj |
| 6 | Polarization 1 | -A-Aj, -A-Aj, A-Aj, -A+Aj, A+Aj, A-Aj, A-Aj, -A-Aj, A+Aj, -A-Aj, A+Aj, -A+Aj, -A-Aj, -A+Aj, A+Aj |
| | Polarization 2 | -A+Aj, A-Aj, A+Aj, A+Aj, -A-Aj, -A+Aj, A-Aj, -A-Aj, A-Aj, -A+Aj, -A-Aj, A-Aj, -A+Aj, -A+Aj, A+Aj |
| 7 | Polarization 1 | -A-Aj, A+Aj, A-Aj, A-Aj, -A+Aj, -A-Aj, A+Aj, -A+Aj, A+Aj, -A-Aj, -A+Aj, A+Aj, -A-Aj, -A-Aj, A-Aj |
| | Polarization 2 | -A+Aj, -A+Aj, A+Aj, -A-Aj, A-Aj, A+Aj, A+Aj, -A+Aj, A-Aj, -A+Aj, A-Aj, -A-Aj, -A+Aj, -A-Aj, A-Aj |

202

(continued)

| Index | Polarization | Training sequence |
|---|---|---|
| 8 | Polarization 1 | -A-Aj, -A-Aj, -A+Aj, A-Aj, A+Aj, -A+Aj, -A+Aj, -A-Aj, A+Aj, -A-Aj, A+Aj, A-Aj, -A-Aj, A-Aj, A+Aj |
| | Polarization 2 | -A+Aj, A-Aj, -A-Aj, -A-Aj, A+Aj, -A+Aj, A-Aj, A+Aj, A-Aj, -A+Aj, A+Aj, A-Aj, -A+Aj, -A+Aj, -A-Aj |
| 9 | Polarization 1 | -A-Aj, A+Aj, -A+Aj, -A+Aj, A-Aj, -A-Aj, A+Aj, A-Aj, A+Aj, -A-Aj, A-Aj, A+Aj, -A-Aj, -A-Aj, -A+Aj |
| | Polarization 2 | A-Aj, A-Aj, A+Aj, -A-Aj, -A+Aj, A+Aj, A+Aj, A-Aj, -A+Aj, A-Aj, -A+Aj, -A-Aj, A-Aj, -A-Aj, -A+Aj |
| 10 | Polarization 1 | -A-Aj, -A-Aj, A-Aj, -A+Aj, A+Aj, A-Aj, A-Aj, -A-Aj, A+Aj, -A-Aj, A+Aj, -A+Aj, -A-Aj, -A+Aj, A+Aj |
| | Polarization 2 | A-Aj, -A+Aj, -A-Aj, -A-Aj, A+Aj, A-Aj, -A+Aj, A+Aj, -A+Aj, A-Aj, A+Aj, -A+Aj, A-Aj, A-Aj, -A-Aj |
| 11 | Polarization 1 | -A-Aj, A+Aj, A-Aj, A-Aj, -A+Aj, -A-Aj, A+Aj, -A+Aj, A+Aj, -A-Aj, -A+Aj, A+Aj, -A-Aj, -A-Aj, A-Aj |
| | Polarization 2 | A-Aj, A-Aj, -A-Aj, A+Aj, -A+Aj, -A-Aj, -A-Aj, A-Aj, -A+Aj, A-Aj, -A+Aj, A+Aj, A-Aj, A+Aj, -A+Aj |
| 12 | Polarization 1 | -A-Aj, -A-Aj, -A+Aj, A-Aj, A+Aj, -A+Aj, -A+Aj, -A-Aj, A+Aj, -A-Aj, A+Aj, A-Aj, -A-Aj, A-Aj, A+Aj |
| | Polarization 2 | A-Aj, -A+Aj, A+Aj, A+Aj, -A-Aj, A-Aj, -A+Aj, -A-Aj, -A+Aj, A-Aj, -A-Aj, -A+Aj, A-Aj, A-Aj, A+Aj |
| 13 | Polarization 1 | -A-Aj, -A-Aj, A+Aj, -A+Aj, A+Aj, A-Aj, -A+Aj, A-Aj, -A-Aj, A-Aj, A+Aj, A-Aj, -A-Aj, -A+Aj, -A+Aj |
| | Polarization 2 | A+Aj, A-Aj, A+Aj, -A-Aj, -A+Aj, -A-Aj, A-Aj, A+Aj, A+Aj, -A-Aj, A-Aj, A+Aj, -A-Aj, -A+Aj, -A+Aj |
| 14 | Polarization 1 | -A-Aj, A-Aj, -A-Aj, A+Aj, -A+Aj, A+Aj, A-Aj, -A-Aj, -A-Aj, A+Aj, A-Aj, -A-Aj, A+Aj, -A+Aj, -A+Aj |
| | Polarization 2 | A+Aj, A+Aj, -A-Aj, -A+Aj, -A-Aj, A-Aj, -A+Aj, A-Aj, A+Aj, A-Aj, -A-Aj, A-Aj, A+Aj, -A+Aj, -A+Aj |
| 15 | Polarization 1 | -A-Aj, -A-Aj, A-Aj, -A+Aj, A+Aj, -A+Aj, -A-Aj, A+Aj, A+Aj, -A-Aj, A+Aj, A-Aj, -A-Aj, A-Aj, -A+Aj |
| | Polarization 2 | A+Aj, A+Aj, A-Aj, -A+Aj, A-Aj, A+Aj, -A-Aj, -A+Aj, -A+Aj, A+Aj, -A-Aj, A-Aj, A-Aj, -A+Aj, -A-Aj |
| 16 | Polarization 1 | -A-Aj, -A-Aj, -A+Aj, A-Aj, A+Aj, A-Aj, -A-Aj, A+Aj, A+Aj, -A-Aj, A+Aj, -A+Aj, -A-Aj, -A+Aj, A-Aj |
| | Polarization 2 | A+Aj, A+Aj, -A+Aj, A-Aj, -A+Aj, A+Aj, -A-Aj, A-Aj, A-Aj, A+Aj, -A-Aj, -A+Aj, -A+Aj, A-Aj, -A-Aj |
| 17 | Polarization 1 | -A-Aj, -A-Aj, A-Aj, -A+Aj, A-Aj, -A-Aj, A+Aj, -A+Aj, -A+Aj, -A-Aj, A+Aj, A-Aj, A-Aj, -A+Aj, A+Aj |
| | Polarization 2 | A+Aj, A+Aj, A-Aj, -A+Aj, -A-Aj, -A+Aj, A+Aj, -A-Aj, -A-Aj, A+Aj, -A-Aj, A-Aj, A+Aj, A-Aj, -A+Aj |
| 18 | Polarization 1 | -A-Aj, -A-Aj, A+Aj, A-Aj, A+Aj, -A+Aj, A-Aj, -A+Aj, -A-Aj, -A+Aj, A+Aj, -A+Aj, -A-Aj, A-Aj, A-Aj |
| | Polarization 2 | A+Aj, -A+Aj, A+Aj, -A-Aj, A-Aj, -A-Aj, -A+Aj, A+Aj, A+Aj, -A-Aj, -A+Aj, A+Aj, -A-Aj, A-Aj, A-Aj |

(continued)

| Index | Polarization | Training sequence |
|---|---|---|
| 19 | Polarization 1 | -A-Aj, -A-Aj, -A+Aj, A-Aj, -A+Aj, -A-Aj, A+Aj, A-Aj, A-Aj, -A-Aj, A+Aj, -A+Aj, -A+Aj, A-Aj, A+Aj |
|  | Polarization 2 | A+Aj, A+Aj, -A+Aj, A-Aj, -A-Aj, A-Aj, A+Aj, -A-Aj, -A-Aj, A+Aj, -A-Aj, -A+Aj, A+Aj, -A+Aj, A-Aj |
| 20 | Polarization 1 | -A-Aj, -A+Aj, -A-Aj, A+Aj, A-Aj, A+Aj, -A+Aj, -A-Aj, -A-Aj, A+Aj, -A+Aj, -A-Aj, A+Aj, A-Aj, A-Aj |
|  | Polarization 2 | A+Aj, A+Aj, -A-Aj, A-Aj, -A-Aj, -A+Aj, A-Aj, -A+Aj, A+Aj, -A+Aj, -A-Aj, -A+Aj, A+Aj, A-Aj, A-Aj |
| 21 | Polarization 1 | -A+Aj, -A+Aj, A-Aj, -A-Aj, A-Aj, A+Aj, -A-Aj, A+Aj, -A+Aj, A+Aj, A-Aj, A+Aj, -A+Aj, -A-Aj, -A-A |
|  | Polarization 2 | -A+Aj, -A-Aj, -A+Aj, A-Aj, A+Aj, A-Aj, -A-Aj, -A+Aj, -A+Aj, A-Aj, -A-Aj, -A+Aj, A-Aj, A+Aj, A+Aj |
| 22 | Polarization 1 | -A+Aj, A+Aj, -A+Aj, A-Aj, -A-Aj, A-Aj, A+Aj, -A+Aj, -A+Aj, A-Aj, A+Aj, -A+Aj, A-Aj, -A-Aj, -A-Aj |
|  | Polarization 2 | -A+Aj, -A+Aj, A-Aj, A+Aj, A-Aj, -A-Aj, A+Aj, -A-Aj, -A+Aj, -A-Aj, A-Aj, -A-Aj, -A+Aj, A+Aj, A+Aj |
| 23 | Polarization 1 | -A+Aj, -A+Aj, A+Aj, -A-Aj, A-Aj, -A-Aj, -A+Aj, A-Aj, A-Aj, -A+Aj, A-Aj, A+Aj, -A+Aj, A+Aj, -A-Aj |
|  | Polarization 2 | -A+Aj, -A+Aj, -A-Aj, A+Aj, -A-Aj, -A+Aj, A-Aj, A+Aj, A+Aj, -A+Aj, A-Aj, -A-Aj, -A-Aj, A+Aj, A-Aj |
| 24 | Polarization 1 | -A+Aj, -A+Aj, -A-Aj, A+Aj, A-Aj, A+Aj, -A+Aj, A-Aj, A-Aj, -A+Aj, A-Aj, -A-Aj, -A+Aj, -A-Aj, A+Aj |
|  | Polarization 2 | -A+Aj, -A+Aj, A+Aj, -A-Aj, A+Aj, -A+Aj, A-Aj, -A-Aj, -A-Aj, -A+Aj, A-Aj, A+Aj, A+Aj, -A-Aj, A-Aj |
| 25 | Polarization 1 | -A+Aj, -A+Aj, A-Aj, -A-Aj, A-Aj, A+Aj, -A-Aj, A+Aj, -A+Aj, A+Aj, A-Aj, A+Aj, -A+Aj, -A-Aj, -A-Aj |
|  | Polarization 2 | A-Aj, A+Aj, A-Aj, -A+Aj, -A-Aj, -A+Aj, A+Aj, A-Aj, A-Aj, -A+Aj, A+Aj, A-Aj, -A+Aj, -A-Aj, -A-Aj |
| 26 | Polarization 1 | -A+Aj, A+Aj, -A+Aj, A-Aj, -A-Aj, A-Aj, A+Aj, -A+Aj, -A+Aj, A-Aj, A+Aj, -A+Aj, A-Aj, -A-Aj, -A-Aj |
|  | Polarization 2 | A-Aj, A-Aj, -A+Aj, -A-Aj, -A+Aj, A+Aj, -A-Aj, A+Aj, A-Aj, A+Aj, -A+Aj, A+Aj, A-Aj, -A-Aj, -A-Aj |
| 27 | Polarization 1 | -A+Aj, -A+Aj, A+Aj, -A-Aj, A-Aj, -A-Aj, -A+Aj, A-Aj, A-Aj, -A+Aj, A-Aj, A+Aj, -A+Aj, A+Aj, -A-Aj |
|  | Polarization 2 | A-Aj, A-Aj, A+Aj, -A-Aj, A+Aj, A-Aj, -A+Aj, -A-Aj, -A-Aj, A-Aj, -A+Aj, A+Aj, A+Aj, -A-Aj, -A+Aj |
| 28 | Polarization 1 | -A+Aj, -A+Aj, -A-Aj, A+Aj, A-Aj, A+Aj, -A+Aj, A-Aj, A-Aj, -A+Aj, A-Aj, -A-Aj, -A+Aj, -A-Aj, A+Aj |
|  | Polarization 2 | A-Aj, A-Aj, -A-Aj, A+Aj, -A-Aj, A-Aj, -A+Aj, A+Aj, A+Aj, A-Aj, -A+Aj, -A-Aj, -A-Aj, A+Aj, -A+Aj |
| 29 | Polarization 1 | -A+Aj, -A+Aj, A+Aj, -A-Aj, A+Aj, -A+Aj, A-Aj, -A-Aj, -A-Aj, -A+Aj, A-Aj, A+Aj, A+Aj, -A-Aj, A-Aj |
|  | Polarization 2 | A-Aj, A-Aj, A+Aj, -A-Aj, -A+Aj, -A-Aj, A-Aj, -A+Aj, -A+Aj, A-Aj, -A+Aj, A+Aj, A-Aj, A+Aj, -A-Aj |

(continued)

| Index | Polarization | Training sequence |
|---|---|---|
| 30 | Polarization 1 | -A+Aj, -A+Aj, A-Aj, A+Aj, A-Aj, -A-Aj, A+Aj, -A-Aj, -A+Aj, -A-Aj, A-Aj, -A-Aj, -A+Aj, A+Aj, A+Aj |
|  | Polarization 2 | A-Aj, -A-Aj, A-Aj, -A+Aj, A+Aj, -A+Aj, -A-Aj, A-Aj, A-Aj, -A+Aj, -A-Aj, A-Aj, -A+Aj, A+Aj, A+Aj |
| 31 | Polarization 1 | -A+Aj, -A+Aj, -A-Aj, A+Aj, -A-Aj, -A+Aj, A-Aj, A+Aj, A+Aj, -A+Aj, A-Aj, -A-Aj, -A-Aj, A+Aj, A-Aj |
|  | Polarization 2 | A-Aj, A-Aj, -A-Aj, A+Aj, -A+Aj, A+Aj, A-Aj, -A+Aj, -A+Aj, A-Aj, -A+Aj, -A-Aj, A-Aj, -A-Aj, A+Aj |
| 32 | Polarization 1 | -A+Aj, -A-Aj, -A+Aj, A-Aj, A+Aj, A-Aj, -A-Aj, -A+Aj, -A+Aj, A-Aj, -A-Aj, -A+Aj, A-Aj, A+Aj, A+Aj |
|  | Polarization 2 | A-Aj, A-Aj, -A+Aj, A+Aj, -A+Aj, -A-Aj, A+Aj, -A-Aj, A-Aj, -A-Aj, -A+Aj, -A-Aj, A-Aj, A+Aj, A+Aj |
| 33 | Polarization 1 | -A+Aj, A-Aj, -A-Aj, -A-Aj, A+Aj, -A+Aj, A-Aj, A+Aj, A-Aj, -A+Aj, A+Aj, A-Aj, -A+Aj, -A+Aj, -A-Aj |
|  | Polarization 2 | A+Aj, A+Aj, A-Aj, -A+Aj, -A-Aj, A-Aj, A-Aj, A+Aj, -A-Aj, A+Aj, -A-Aj, -A+Aj, A+Aj, -A+Aj, -A-Aj |
| 34 | Polarization 1 | -A+Aj, -A+Aj, A+Aj, -A-Aj, A-Aj, A+Aj, A+Aj, -A+Aj, A-Aj, -A+Aj, A-Aj, -A-Aj, -A+Aj, -A-Aj, A-Aj |
|  | Polarization 2 | A+Aj, -A-Aj, -A+Aj, -A+Aj, A-Aj, A+Aj, -A-Aj, A-Aj, -A-Aj, A+Aj, A-Aj, -A-Aj, A+Aj, A+Aj, -A+Aj |
| 35 | Polarization 1 | -A+Aj, A-Aj, A+Aj, A+Aj, -A-Aj, -A+Aj, A-Aj, -A-Aj, A-Aj, -A+Aj, -A-Aj, A-Aj, -A+Aj, -A+Aj, A+Aj |
|  | Polarization 2 | A+Aj, A+Aj, -A+Aj, A-Aj, -A-Aj, -A+Aj, -A+Aj, A+Aj, -A-Aj, A+Aj, -A-Aj, A-Aj, A+Aj, A-Aj, -A-Aj |
| 36 | Polarization 1 | -A+Aj, -A+Aj, -A-Aj, A+Aj, A-Aj, -A-Aj, -A-Aj, -A+Aj, A-Aj, -A+Aj, A-Aj, A+Aj, -A+Aj, A+Aj, A-Aj |
|  | Polarization 2 | A+Aj, -A-Aj, A-Aj, A-Aj, -A+Aj, A+Aj, -A-Aj, -A+Aj, -A-Aj, A+Aj, -A+Aj, -A-Aj, A+Aj, A+Aj, A-Aj |
| 37 | Polarization 1 | A-Aj, A+Aj, A-Aj, -A+Aj, -A-Aj, -A+Aj, A+Aj, A-Aj, A-Aj, -A+Aj, A+Aj, A-Aj, -A+Aj, -A-Aj, -A-Aj |
|  | Polarization 2 | A-Aj, A-Aj, -A+Aj, A+Aj, -A+Aj, -A-Aj, A+Aj, -A-Aj, A-Aj, -A-Aj, -A+Aj, -A-Aj, A-Aj, A+Aj, A+Aj |
| 38 | Polarization 1 | A-Aj, A-Aj, A+Aj, -A-Aj, A+Aj, A-Aj, -A+Aj, -A-Aj, -A-Aj, A-Aj, -A+Aj, A+Aj, A+Aj, -A-Aj, -A+Aj |
|  | Polarization 2 | A-Aj, A-Aj, -A-Aj, A+Aj, -A+Aj, A+Aj, A-Aj, -A+Aj, -A+Aj, A-Aj, -A+Aj, -A-Aj, A-Aj, -A-Aj, A+Aj |
| 39 | Polarization 1 | A-Aj, A-Aj, -A+Aj, -A-Aj, -A+Aj, A+Aj, -A-Aj, A+Aj, A-Aj, A+Aj, -A+Aj, A+Aj, A-Aj, -A-Aj, -A-Aj |
|  | Polarization 2 | A-Aj, -A-Aj, A-Aj, -A+Aj, A+Aj, -A+Aj, -A-Aj, A-Aj, A-Aj, -A+Aj, -A-Aj, A-Aj, -A+Aj, A+Aj, A+Aj |
| 40 | Polarization 1 | A-Aj, A-Aj, -A-Aj, A+Aj, -A-Aj, A-Aj, -A+Aj, A+Aj, A+Aj, A-Aj, -A+Aj, -A-Aj, -A-Aj, A+Aj, -A+Aj |
|  | Polarization 2 | A-Aj, A-Aj, A+Aj, -A-Aj, -A+Aj, -A-Aj, A-Aj, -A+Aj, -A+Aj, A-Aj, -A+Aj, A+Aj, A-Aj, A+Aj, -A-Aj |

(continued)

| Index | Polarization | Training sequence |
|---|---|---|
| 41 | Polarization 1 | A-Aj, A-Aj, A+Aj, -A-Aj, -A+Aj, A+Aj, A+Aj, A-Aj, -A+Aj, A-Aj, -A+Aj, -A-Aj, A-Aj, -A-Aj, -A+Aj |
| | Polarization 2 | A+Aj, -A-Aj, A-Aj, A-Aj, -A+Aj, A+Aj, -A-Aj, -A+Aj, -A-Aj, A+Aj, -A+Aj, -A-Aj, A+Aj, A+Aj, A-Aj |
| 42 | Polarization 1 | A-Aj, -A+Aj, -A-Aj, -A-Aj, A+Aj, A-Aj, -A+Aj, A+Aj, -A+Aj, A-Aj, A+Aj, -A+Aj, A-Aj, A-Aj, -A-Aj |
| | Polarization 2 | A+Aj, A+Aj, -A+Aj, A-Aj, -A-Aj, -A+Aj, -A+Aj, A+Aj, -A-Aj, A+Aj, -A-Aj, A-Aj, A+Aj, A-Aj, -A-Aj |
| 43 | Polarization 1 | A-Aj, A-Aj, -A-Aj, A+Aj, -A+Aj, -A-Aj, -A-Aj, A-Aj, -A+Aj, A-Aj, -A+Aj, A+Aj, A-Aj, A+Aj, -A+Aj |
| | Polarization 2 | A+Aj, -A-Aj, -A+Aj, -A+Aj, A-Aj, A+Aj, -A-Aj, A-Aj, -A-Aj, A+Aj, A-Aj, -A-Aj, A+Aj, A+Aj, -A+Aj |
| 44 | Polarization 1 | A-Aj, -A+Aj, A+Aj, A+Aj, -A-Aj, A-Aj, -A+Aj, -A-Aj, -A+Aj, A-Aj, -A-Aj, -A+Aj, A-Aj, A-Aj, A+Aj |
| | Polarization 2 | A+Aj, A+Aj, A-Aj, -A+Aj, -A-Aj, A-Aj, A-Aj, A+Aj, -A-Aj, A+Aj, -A-Aj, -A+Aj, A+Aj, -A+Aj, -A-Aj |
| 45 | Polarization 1 | A+Aj, A-Aj, A+Aj, -A-Aj, -A+Aj, -A-Aj, A-Aj, A+Aj, A+Aj, -A-Aj, A-Aj, A+Aj, -A-Aj, -A+Aj, -A+Aj |
| | Polarization 2 | A+Aj, A+Aj, -A-Aj, A-Aj, -A-Aj, -A+Aj, A-Aj, -A+Aj, A+Aj, -A+Aj, -A-Aj, -A+Aj, A+Aj, A-Aj, A-Aj |
| 46 | Polarization 1 | A+Aj, A+Aj, A-Aj, -A+Aj, A-Aj, A+Aj, -A-Aj, -A+Aj, -A+Aj, A+Aj, -A-Aj, A-Aj, A-Aj, -A+Aj, -A-Aj |
| | Polarization 2 | A+Aj, A+Aj, -A+Aj, A-Aj, -A-Aj, A-Aj, A+Aj, -A-Aj, -A-Aj, A+Aj, -A-Aj, -A+Aj, A+Aj, -A+Aj, A-Aj |
| 47 | Polarization 1 | A+Aj, A+Aj, -A-Aj, -A+Aj, -A-Aj, A-Aj, -A+Aj, A-Aj, A+Aj, A-Aj, -A-Aj, A-Aj, A+Aj, -A+Aj, -A+Aj |
| | Polarization 2 | A+Aj, -A+Aj, A+Aj, -A-Aj, A-Aj, -A-Aj, -A+Aj, A+Aj, A+Aj, -A-Aj, -A+Aj, A+Aj, -A-Aj, A-Aj, -A-Aj |
| 48 | Polarization 1 | A+Aj, A+Aj, -A+Aj, A-Aj, -A+Aj, A+Aj, -A-Aj, A-Aj, A-Aj, A+Aj, -A-Aj, -A+Aj, -A+Aj, A-Aj, -A-Aj |
| | Polarization 2 | A+Aj, A+Aj, A-Aj, -A+Aj, -A-Aj, -A+Aj, A+Aj, -A-Aj, -A-Aj, A+Aj, -A-Aj, A-Aj, A+Aj, A-Aj, -A+Aj |

(13) When $N_{TS}$ = 17, the training sequence is one item in the following Table 43.

**Table 43**

| Index | Polarization | Training sequence |
|---|---|---|
| 1 | Polarization 1 | -A-Aj, A-Aj, A+Aj, -A-Aj, A-Aj, A-Aj, -A-Aj, A+Aj, -A-Aj, -A+Aj, -A+Aj, A+Aj, -A-Aj, -A+Aj, A-Aj, A+Aj, -A+Aj |
| | Polarization 2 | -A-Aj, -A-Aj, A-Aj, A+Aj, -A-Aj, -A+Aj, -A-Aj, -A+Aj, A+Aj, A-Aj, -A-Aj, A-Aj, -A+Aj, A-Aj, A+Aj, -A+Aj, A+Aj |
| 2 | Polarization 1 | -A-Aj, -A+Aj, A+Aj, -A-Aj, -A+Aj, -A+Aj, -A-Aj, A+Aj, -A-Aj, A-Aj, A-Aj, A+Aj, -A-Aj, A-Aj, -A+Aj, A+Aj, A-Aj |
| | Polarization 2 | -A-Aj, -A-Aj, -A+Aj, A+Aj, -A-Aj, A-Aj, -A-Aj, A-Aj, A+Aj, -A+Aj, -A-Aj, -A+Aj, A-Aj, -A+Aj, A+Aj, A-Aj, A+Aj |

(continued)

| Index | Polarization | Training sequence |
|---|---|---|
| 3 | Polarization 1 | -A-Aj, A-Aj, A+Aj, -A-Aj, A-Aj, A-Aj, -A-Aj, A+Aj, -A-Aj, -A+Aj, -A+Aj, A+Aj, -A-Aj, -A+Aj, A-Aj, A+Aj, -A+Aj |
|  | Polarization 2 | -A+Aj, -A+Aj, -A-Aj, A-Aj, -A+Aj, A+Aj, -A+Aj, A+Aj, A-Aj, -A-Aj, -A+Aj, -A-Aj, A+Aj, -A-Aj, A-Aj, A+Aj, A-Aj |
| 4 | Polarization 1 | -A-Aj, -A-Aj, A-Aj, A+Aj, -A-Aj, -A+Aj, -A-Aj, -A+Aj, A+Aj, A-Aj, -A-Aj, A-Aj, -A+Aj, A-Aj, A+Aj, -A+Aj, A+Aj |
|  | Polarization 2 | -A+Aj, -A-Aj, A-Aj, -A+Aj, -A-Aj, -A-Aj, -A+Aj, A-Aj, -A+Aj, A+Aj, A+Aj, A-Aj, -A+Aj, A+Aj, -A-Aj, A-Aj, A+Aj |
| 5 | Polarization 1 | -A-Aj, -A+Aj, A+Aj, -A-Aj, -A+Aj, -A+Aj, -A-Aj, A+Aj, -A-Aj, A-Aj, A-Aj, A+Aj, -A-Aj, A-Aj, -A+Aj, A+Aj, A-Aj |
|  | Polarization 2 | -A+Aj, -A+Aj, A+Aj, A-Aj, -A+Aj, -A-Aj, -A+Aj, -A-Aj, A-Aj, A+Aj, -A+Aj, A+Aj, -A-Aj, A+Aj, A-Aj, -A-Aj, A-Aj |
| 6 | Polarization 1 | -A-Aj, -A-Aj, -A+Aj, A+Aj, -A-Aj, A-Aj, -A-Aj, A-Aj, A+Aj, -A+Aj, -A-Aj, -A+Aj, A-Aj, -A+Aj, A+Aj, A-Aj, A+Aj |
|  | Polarization 2 | -A+Aj, A+Aj, A-Aj, -A+Aj, A+Aj, A+Aj, -A+Aj, A-Aj, -A+Aj, -A-Aj, -A-Aj, A-Aj, -A+Aj, -A-Aj, A+Aj, A-Aj, -A-Aj |
| 7 | Polarization 1 | -A-Aj, A-Aj, A+Aj, -A-Aj, A-Aj, A-Aj, -A-Aj, A+Aj, -A-Aj, -A+Aj, -A+Aj, A+Aj, -A-Aj, -A+Aj, A-Aj, A+Aj, -A+Aj |
|  | Polarization 2 | A-Aj, A-Aj, A+Aj, -A+Aj, A-Aj, -A-Aj, A-Aj, -A-Aj, -A+Aj, A+Aj, A-Aj, A+Aj, -A-Aj, A+Aj, -A+Aj, - A-Aj, -A+Aj |
| 8 | Polarization 1 | -A-Aj, -A-Aj, A-Aj, A+Aj, -A-Aj, -A+Aj, -A-Aj, -A+Aj, A+Aj, A-Aj, -A-Aj, A-Aj, -A+Aj, A-Aj, A+Aj, -A+Aj, A+Aj |
|  | Polarization 2 | A-Aj, A+Aj, -A+Aj, A-Aj, A+Aj, A+Aj, A-Aj, -A+Aj, A-Aj, -A-Aj, -A-Aj, -A+Aj, A-Aj, -A-Aj, A+Aj, - A+Aj, -A-Aj |
| 9 | Polarization 1 | -A-Aj, -A+Aj, A+Aj, -A-Aj, -A+Aj, -A+Aj, -A-Aj, A+Aj, -A-Aj, A-Aj, A-Aj, A+Aj, -A-Aj, A-Aj, - A+Aj, A+Aj, A-Aj |
|  | Polarization 2 | A-Aj, A-Aj, -A-Aj, -A+Aj, A-Aj, A+Aj, A-Aj, A+Aj, -A+Aj, -A-Aj, A-Aj, -A-Aj, A+Aj, -A-Aj, -A+Aj, A+Aj, -A+Aj |
| 10 | Polarization 1 | -A-Aj, -A-Aj, -A+Aj, A+Aj, -A-Aj, A-Aj, -A-Aj, A-Aj, A+Aj, -A+Aj, -A-Aj, -A+Aj, A-Aj, -A+Aj, A+Aj, A-Aj, A+Aj |
|  | Polarization 2 | A-Aj, -A-Aj, -A+Aj, A-Aj, -A-Aj, -A-Aj, A-Aj, -A+Aj, A-Aj, A+Aj, A+Aj, -A+Aj, A-Aj, A+Aj, -A-Aj, - A+Aj, A+Aj |
| 11 | Polarization 1 | -A-Aj, A-Aj, A+Aj, -A-Aj, A-Aj, A-Aj, -A-Aj, A+Aj, -A-Aj, -A+Aj, -A+Aj, A+Aj, -A-Aj, -A+Aj, A-Aj, A+Aj, -A+Aj |
|  | Polarization 2 | A+Aj, A+Aj, -A+Aj, -A-Aj, A+Aj, A-Aj, A+Aj, A-Aj, -A-Aj, -A+Aj, A+Aj, -A+Aj, A-Aj, -A+Aj, -A-Aj, A-Aj, -A-Aj |
| 12 | Polarization 1 | -A-Aj, -A-Aj, A-Aj, A+Aj, -A-Aj, -A+Aj, -A-Aj, -A+Aj, A+Aj, A-Aj, -A-Aj, A-Aj, -A+Aj, A-Aj, A+Aj, -A+Aj, A+Aj |
|  | Polarization 2 | A+Aj, -A+Aj, -A-Aj, A+Aj, -A+Aj, -A+Aj, A+Aj, -A-Aj, A+Aj, A-Aj, A-Aj, -A-Aj, A+Aj, A-Aj, -A+Aj, -A-Aj, A-Aj |
| 13 | Polarization 1 | -A-Aj, -A+Aj, A+Aj, -A-Aj, -A+Aj, -A+Aj, -A-Aj, A+Aj, -A-Aj, A-Aj, A-Aj, A+Aj, -A-Aj, A-Aj, - A+Aj, A+Aj, A-Aj |
|  | Polarization 2 | A+Aj, A+Aj, A-Aj, -A-Aj, A+Aj, -A+Aj, A+Aj, -A+Aj, -A-Aj, A-Aj, A+Aj, A-Aj, -A+Aj, A-Aj, -A-Aj, - A+Aj, -A-Aj |

(continued)

| Index | Polarization | Training sequence |
|---|---|---|
| 14 | Polarization 1 | -A-Aj, -A-Aj, -A+Aj, A+Aj, -A-Aj, A-Aj, -A-Aj, A-Aj, A+Aj, -A+Aj, -A-Aj, -A+Aj, A-Aj, -A+Aj, A+Aj, A-Aj, A+Aj |
| | Polarization 2 | A+Aj, A-Aj, -A-Aj, A+Aj, A-Aj, A-Aj, A+Aj, -A-Aj, A+Aj, -A+Aj, -A+Aj, -A-Aj, A+Aj, -A+Aj, A-Aj, - A-Aj, -A+Aj |
| 15 | Polarization 1 | -A+Aj, A+Aj, A-Aj, -A+Aj, A+Aj, A+Aj, -A+Aj, A-Aj, -A+Aj, -A-Aj, -A-Aj, A-Aj, -A+Aj, -A-Aj, A+Aj, A-Aj, -A-Aj |
| | Polarization 2 | -A+Aj, -A+Aj, A+Aj, A-Aj, -A+Aj, -A-Aj, -A+Aj, -A-Aj, A-Aj, A+Aj, -A+Aj, A+Aj, -A-Aj, A+Aj, A-Aj, -A-Aj, A-Aj |
| 16 | Polarization 1 | -A+Aj, -A-Aj, A-Aj, -A+Aj, -A-Aj, -A-Aj, -A+Aj, A-Aj, -A+Aj, A+Aj, A+Aj, A-Aj, -A+Aj, A+Aj, -A-Aj, A-Aj, A+Aj |
| | Polarization 2 | -A+Aj, -A+Aj, -A-Aj, A-Aj, -A+Aj, A+Aj, -A+Aj, A+Aj, A-Aj, -A-Aj, -A+Aj, -A-Aj, A+Aj, -A-Aj, A-Aj, A+Aj, A-Aj |
| 17 | Polarization 1 | -A+Aj, A+Aj, A-Aj, -A+Aj, A+Aj, A+Aj, -A+Aj, A-Aj, -A+Aj, -A-Aj, -A-Aj, A-Aj, -A+Aj, -A-Aj, A+Aj, A-Aj, -A-Aj |
| | Polarization 2 | A-Aj, A-Aj, -A-Aj, -A+Aj, A-Aj, A+Aj, A-Aj, A+Aj, -A+Aj, -A-Aj, A-Aj, -A-Aj, A+Aj, -A-Aj, -A+Aj, A+Aj, -A+Aj |
| 18 | Polarization 1 | -A+Aj, -A+Aj, A+Aj, A-Aj, -A+Aj, -A-Aj, -A+Aj, -A-Aj, A-Aj, A+Aj, -A+Aj, A+Aj, -A-Aj, A+Aj, A-Aj, -A-Aj, A-Aj |
| | Polarization 2 | A-Aj, -A-Aj, -A+Aj, A-Aj, -A-Aj, -A-Aj, A-Aj, -A+Aj, A-Aj, A+Aj, A+Aj, -A+Aj, A-Aj, A+Aj, -A-Aj, - A+Aj, A+Aj |
| 19 | Polarization 1 | -A+Aj, -A-Aj, A-Aj, -A+Aj, -A-Aj, -A-Aj, -A+Aj, A-Aj, -A+Aj, A+Aj, A+Aj, A-Aj, -A+Aj, A+Aj, -A-Aj, A-Aj, A+Aj |
| | Polarization 2 | A-Aj, A-Aj, A+Aj, -A+Aj, A-Aj, -A-Aj, A-Aj, -A-Aj, -A+Aj, A+Aj, A-Aj, A+Aj, -A-Aj, A+Aj, -A+Aj, - A-Aj, -A+Aj |
| 20 | Polarization 1 | -A+Aj, -A+Aj, -A-Aj, A-Aj, -A+Aj, A+Aj, -A+Aj, A+Aj, A-Aj, -A-Aj, -A+Aj, -A-Aj, A+Aj, -A-Aj, A-Aj, A+Aj, A-Aj |
| | Polarization 2 | A-Aj, A+Aj, -A+Aj, A-Aj, A+Aj, A+Aj, A-Aj, -A+Aj, A-Aj, -A-Aj, -A-Aj, -A+Aj, A-Aj, -A-Aj, A+Aj, - A+Aj, -A-Aj |
| 21 | Polarization 1 | -A+Aj, A+Aj, A-Aj, -A+Aj, A+Aj, A+Aj, -A+Aj, A-Aj, -A+Aj, -A-Aj, -A-Aj, A-Aj, -A+Aj, -A-Aj, A+Aj, A-Aj, -A-Aj |
| | Polarization 2 | A+Aj, A+Aj, A-Aj, -A-Aj, A+Aj, -A+Aj, A+Aj, -A+Aj, -A-Aj, A-Aj, A+Aj, A-Aj, -A+Aj, A-Aj, -A-Aj, - A+Aj, -A-Aj |
| 22 | Polarization 1 | -A+Aj, -A+Aj, A+Aj, A-Aj, -A+Aj, -A-Aj, -A+Aj, -A-Aj, A-Aj, A+Aj, -A+Aj, A+Aj, -A-Aj, A+Aj, A-Aj, -A-Aj, A-Aj |
| | Polarization 2 | A+Aj, A-Aj, -A-Aj, A+Aj, A-Aj, A-Aj, A+Aj, -A-Aj, A+Aj, -A+Aj, -A+Aj, -A-Aj, A+Aj, -A+Aj, A-Aj, - A-Aj, -A+Aj |
| 23 | Polarization 1 | -A+Aj, -A-Aj, A-Aj, -A+Aj, -A-Aj, -A-Aj, -A+Aj, A-Aj, -A+Aj, A+Aj, A+Aj, A-Aj, -A+Aj, A+Aj, -A-Aj, A-Aj, A+Aj |
| | Polarization 2 | A+Aj, A+Aj, -A+Aj, -A-Aj, A+Aj, A-Aj, A+Aj, A-Aj, -A-Aj, -A+Aj, A+Aj, -A+Aj, A-Aj, -A+Aj, -A-Aj, A-Aj, -A-Aj |
| 24 | Polarization 1 | -A+Aj, -A+Aj, -A-Aj, A-Aj, -A+Aj, A+Aj, -A+Aj, A+Aj, A-Aj, -A-Aj, -A+Aj, -A-Aj, A+Aj, -A-Aj, A-Aj, A+Aj, A-Aj |
| | Polarization 2 | A+Aj, -A+Aj, -A-Aj, A+Aj, -A+Aj, -A+Aj, A+Aj, -A-Aj, A+Aj, A-Aj, A-Aj, -A-Aj, A+Aj, A-Aj, -A+Aj, -A-Aj, A-Aj |

(continued)

| Index | Polarization | Training sequence |
|---|---|---|
| 25 | Polarization 1 | A-Aj, A-Aj, A+Aj, -A+Aj, A-Aj, -A-Aj, A-Aj, -A-Aj, -A+Aj, A+Aj, A-Aj, A+Aj, -A-Aj, A+Aj, -A+Aj, - A-Aj, -A+Aj |
| | Polarization 2 | A-Aj, A+Aj, -A+Aj, A-Aj, A+Aj, A+Aj, A-Aj, -A+Aj, A-Aj, -A-Aj, -A-Aj, -A+Aj, A-Aj, -A-Aj, A+Aj, - A+Aj, -A-Aj |
| 26 | Polarization 1 | A-Aj, A-Aj, -A-Aj, -A+Aj, A-Aj, A+Aj, A-Aj, A+Aj, -A+Aj, -A-Aj, A-Aj, -A-Aj, A+Aj, -A-Aj, -A+Aj, A+Aj, -A+Aj |
| | Polarization 2 | A-Aj, -A-Aj, -A+Aj, A-Aj, -A-Aj, -A-Aj, A-Aj, -A+Aj, A-Aj, A+Aj, A+Aj, -A+Aj, A-Aj, A+Aj, -A-Aj, - A+Aj, A+Aj |
| 27 | Polarization 1 | A-Aj, A-Aj, A+Aj, -A+Aj, A-Aj, -A-Aj, A-Aj, -A-Aj, -A+Aj, A+Aj, A-Aj, A+Aj, -A-Aj, A+Aj, -A+Aj, - A-Aj, -A+Aj |
| | Polarization 2 | A+Aj, -A+Aj, -A-Aj, A+Aj, -A+Aj, -A+Aj, A+Aj, -A-Aj, A+Aj, A-Aj, A-Aj, -A-Aj, A+Aj, A-Aj, -A+Aj, -A-Aj, A-Aj |
| 28 | Polarization 1 | A-Aj, A+Aj, -A+Aj, A-Aj, A+Aj, A+Aj, A-Aj, -A+Aj, A-Aj, -A-Aj, -A-Aj, -A+Aj, A-Aj, -A-Aj, A+Aj, - A+Aj, -A-Aj |
| | Polarization 2 | A+Aj, A+Aj, -A+Aj, -A-Aj, A+Aj, A-Aj, A+Aj, A-Aj, -A-Aj, -A+Aj, A+Aj, -A+Aj, A-Aj, -A+Aj, -A-Aj, A-Aj, -A-Aj |
| 29 | Polarization 1 | A-Aj, A-Aj, -A-Aj, -A+Aj, A-Aj, A+Aj, A-Aj, A+Aj, -A+Aj, -A-Aj, A-Aj, -A-Aj, A+Aj, -A-Aj, -A+Aj, A+Aj, -A+Aj |
| | Polarization 2 | A+Aj, A-Aj, -A-Aj, A+Aj, A-Aj, A-Aj, A+Aj, -A-Aj, A+Aj, -A+Aj, -A+Aj, -A-Aj, A+Aj, -A+Aj, A-Aj, - A-Aj, -A+Aj |
| 30 | Polarization 1 | A-Aj, -A-Aj, -A+Aj, A-Aj, -A-Aj, -A-Aj, A-Aj, -A+Aj, A-Aj, A+Aj, A+Aj, -A+Aj, A-Aj, A+Aj, -A-Aj, - A+Aj, A+Aj |
| | Polarization 2 | A+Aj, A+Aj, A-Aj, -A-Aj, A+Aj, -A+Aj, A+Aj, -A+Aj, -A-Aj, A-Aj, A+Aj, A-Aj, -A+Aj, A-Aj, -A-Aj, - A+Aj, -A-Aj |
| 31 | Polarization 1 | A+Aj, A+Aj, A-Aj, -A-Aj, A+Aj, -A+Aj, A+Aj, -A+Aj, -A-Aj, A-Aj, A+Aj, A-Aj, -A+Aj, A-Aj, -A-Aj, - A+Aj, -A-Aj |
| | Polarization 2 | A+Aj, A-Aj, -A-Aj, A+Aj, A-Aj, A-Aj, A+Aj, -A-Aj, A+Aj, -A+Aj, -A+Aj, -A-Aj, A+Aj, -A+Aj, A-Aj, - A-Aj, -A+Aj |
| 32 | Polarization 1 | A+Aj, A+Aj, -A+Aj, -A-Aj, A+Aj, A-Aj, A+Aj, A-Aj, -A-Aj, -A+Aj, A+Aj, -A+Aj, A-Aj, -A+Aj, -A-Aj, A-Aj, -A-Aj |
| | Polarization 2 | A+Aj, -A+Aj, -A-Aj, A+Aj, -A+Aj, -A+Aj, A+Aj, -A-Aj, A+Aj, A-Aj, A-Aj, -A-Aj, A+Aj, A-Aj, -A+Aj, -A-Aj, A-Aj |

(14) When $N_{TS}$ = 19, the training sequence is one item in the following Table 44.

**Table 44**

| Index | Polarization | Training sequence |
|---|---|---|
| 1 | Polarization 1 | -A-Aj, -A-Aj, -A-Aj, A+Aj, A+Aj, A-Aj, -A-Aj, A+Aj, A-Aj, -A+Aj, A-Aj, A+Aj, -A-Aj, -A+Aj, A-Aj, A-Aj, -A+Aj, -A+Aj, -A+Aj |
| | Polarization 2 | -A-Aj, -A-Aj, -A-Aj, A+Aj, A+Aj, -A+Aj, -A-Aj, A+Aj, -A+Aj, -A-Aj, A+Aj, -A-Aj, A+Aj, A-Aj, -A+Aj, -A+Aj, A-Aj, A-Aj, A-Aj |
| 2 | Polarization 1 | -A-Aj, -A-Aj, -A-Aj, A+Aj, A+Aj, A-Aj, -A-Aj, A+Aj, A-Aj, -A-Aj, A+Aj, -A-Aj, A+Aj, -A+Aj, A-Aj, A-Aj, -A+Aj, -A+Aj, -A+Aj |
| | Polarization 2 | -A-Aj, -A-Aj, -A-Aj, A+Aj, A+Aj, -A+Aj, -A-Aj, A+Aj, -A+Aj, A-Aj, -A+Aj, A+Aj, -A-Aj, A-Aj, -A+Aj, -A+Aj, A-Aj, A-Aj, A-Aj |

(continued)

| Index | Polarization | Training sequence |
|---|---|---|
| 3 | Polarization 1 | -A-Aj, -A-Aj, -A-Aj, A+Aj, A+Aj, A-Aj, -A-Aj, A+Aj, A-Aj, -A+Aj, A-Aj, A+Aj, -A-Aj, -A+Aj, A-Aj, A-Aj, -A+Aj, -A+Aj, -A+Aj |
| | Polarization 2 | A+Aj, A+Aj, A+Aj, -A-Aj, -A-Aj, A-Aj, A+Aj, -A-Aj, A-Aj, A+Aj, -A-Aj, A+Aj, -A-Aj, -A+Aj, A-Aj, A-Aj, -A+Aj, -A+Aj, -A+Aj |
| 4 | Polarization 1 | -A-Aj, -A-Aj, -A-Aj, A+Aj, A+Aj, A-Aj, -A-Aj, A+Aj, A-Aj, -A-Aj, A+Aj, -A-Aj, A+Aj, -A+Aj, A-Aj, A-Aj, -A+Aj, -A+Aj, -A+Aj |
| | Polarization 2 | A+Aj, A+Aj, A+Aj, -A-Aj, -A-Aj, A-Aj, A+Aj, -A-Aj, A-Aj, -A+Aj, A-Aj, -A-Aj, A+Aj, -A+Aj, A-Aj, A-Aj, -A+Aj, -A+Aj, -A+Aj |
| 5 | Polarization 1 | -A-Aj, -A-Aj, -A-Aj, A+Aj, A+Aj, -A+Aj, -A-Aj, A+Aj, -A+Aj, A-Aj, -A+Aj, A+Aj, -A-Aj, A-Aj, -A+Aj, -A+Aj, A-Aj, A-Aj, A-Aj |
| | Polarization 2 | A+Aj, A+Aj, A+Aj, -A-Aj, -A-Aj, -A+Aj, A+Aj, -A-Aj, -A+Aj, A+Aj, -A-Aj, A+Aj, -A-Aj, A-Aj, -A+Aj, -A+Aj, A-Aj, A-Aj, A-Aj |
| 6 | Polarization 1 | -A-Aj, -A-Aj, -A-Aj, A+Aj, A+Aj, -A+Aj, -A-Aj, A+Aj, -A+Aj, -A-Aj, A+Aj, -A-Aj, A+Aj, A-Aj, -A+Aj, -A+Aj, A-Aj, A-Aj, A-Aj |
| | Polarization 2 | A+Aj, A+Aj, A+Aj, -A-Aj, -A-Aj, -A+Aj, A+Aj, -A-Aj, -A+Aj, A-Aj, -A+Aj, -A-Aj, A+Aj, A-Aj, -A+Aj, -A+Aj, A-Aj, A-Aj, A-Aj |
| 7 | Polarization 1 | -A+Aj, -A+Aj, -A+Aj, A-Aj, A-Aj, A+Aj, -A+Aj, A-Aj, A+Aj, -A-Aj, A+Aj, A-Aj, -A+Aj, -A-Aj, A+Aj, A+Aj, -A-Aj, -A-Aj, -A-Aj |
| | Polarization 2 | -A+Aj, -A+Aj, -A+Aj, A-Aj, A-Aj, -A-Aj, -A+Aj, A-Aj, -A-Aj, -A+Aj, A-Aj, -A+Aj, A-Aj, A+Aj, -A-Aj, -A-Aj, A+Aj, A+Aj, A+Aj |
| 8 | Polarization 1 | -A+Aj, -A+Aj, -A+Aj, A-Aj, A-Aj, A+Aj, -A+Aj, A-Aj, A+Aj, -A+Aj, A-Aj, -A+Aj, A-Aj, -A-Aj, A+Aj, A+Aj, -A-Aj, -A-Aj, -A-Aj |
| | Polarization 2 | -A+Aj, -A+Aj, -A+Aj, A-Aj, A-Aj, -A-Aj, -A+Aj, A-Aj, -A-Aj, A+Aj, -A-Aj, A-Aj, -A+Aj, A+Aj, -A-Aj, -A-Aj, A+Aj, A+Aj, A+Aj |
| 9 | Polarization 1 | -A+Aj, -A+Aj, -A+Aj, A-Aj, A-Aj, A+Aj, -A+Aj, A-Aj, A+Aj, -A-Aj, A+Aj, A-Aj, -A+Aj, -A-Aj, A+Aj, A+Aj, -A-Aj, -A-Aj, -A-Aj |
| | Polarization 2 | A-Aj, A-Aj, A-Aj, -A+Aj, -A+Aj, A+Aj, A-Aj, -A+Aj, A+Aj, A-Aj, -A+Aj, A-Aj, -A+Aj, -A-Aj, A+Aj, A+Aj, -A-Aj, -A-Aj, -A-Aj |
| 10 | Polarization 1 | -A+Aj, -A+Aj, -A+Aj, A-Aj, A-Aj, A+Aj, -A+Aj, A-Aj, A+Aj, -A+Aj, A-Aj, -A+Aj, A-Aj, -A-Aj, A+Aj, A+Aj, -A-Aj, -A-Aj, -A-Aj |
| | Polarization 2 | A-Aj, A-Aj, A-Aj, -A+Aj, -A+Aj, A+Aj, A-Aj, -A+Aj, A+Aj, -A-Aj, A+Aj, -A+Aj, A-Aj, -A-Aj, A+Aj, A+Aj, -A-Aj, -A-Aj, -A-Aj |
| 11 | Polarization 1 | -A+Aj, -A+Aj, -A+Aj, A-Aj, A-Aj, -A-Aj, -A+Aj, A-Aj, -A-Aj, A+Aj, -A-Aj, A-Aj, -A+Aj, A+Aj, -A-Aj, -A-Aj, A+Aj, A+Aj, A+Aj |
| | Polarization 2 | A-Aj, A-Aj, A-Aj, -A+Aj, -A+Aj, -A-Aj, A-Aj, -A+Aj, -A-Aj, A-Aj, -A+Aj, A-Aj, -A+Aj, A+Aj, - A-Aj, -A-Aj, A+Aj, A+Aj, A+Aj |
| 12 | Polarization 1 | -A+Aj, -A+Aj, -A+Aj, A-Aj, A-Aj, -A-Aj, -A+Aj, A-Aj, -A-Aj, -A+Aj, A-Aj, -A+Aj, A-Aj, A+Aj, -A-Aj, -A-Aj, A+Aj, A+Aj, A+Aj |
| | Polarization 2 | A-Aj, A-Aj, A-Aj, -A+Aj, -A+Aj, -A-Aj, A-Aj, -A+Aj, -A-Aj, A+Aj, -A-Aj, -A+Aj, A-Aj, A+Aj, - A-Aj, -A-Aj, A+Aj, A+Aj, A+Aj |
| 13 | Polarization 1 | A-Aj, A-Aj, A-Aj, -A+Aj, -A+Aj, A+Aj, A-Aj, -A+Aj, A+Aj, A-Aj, -A+Aj, A-Aj, -A+Aj, -A-Aj, A+Aj, A+Aj, -A-Aj, -A-Aj, -A-Aj |
| | Polarization 2 | A-Aj, A-Aj, A-Aj, -A+Aj, -A+Aj, -A-Aj, A-Aj, -A+Aj, -A-Aj, A+Aj, -A-Aj, -A+Aj, A-Aj, A+Aj, - A-Aj, -A-Aj, A+Aj, A+Aj, A+Aj |

(continued)

| Index | Polarization | Training sequence |
|---|---|---|
| 14 | Polarization 1 | A-Aj, A-Aj, A-Aj, -A+Aj, -A+Aj, A+Aj, A-Aj, -A+Aj, A+Aj, -A-Aj, A+Aj, -A+Aj, A-Aj, -A-Aj, A+Aj, A+Aj, -A-Aj, -A-Aj, -A-Aj |
| | Polarization 2 | A-Aj, A-Aj, A-Aj, -A+Aj, -A+Aj, -A-Aj, A-Aj, -A+Aj, -A-Aj, A-Aj, -A+Aj, A-Aj, -A+Aj, A+Aj, - A-Aj, -A-Aj, A+Aj, A+Aj, A+Aj |
| 15 | Polarization 1 | A+Aj, A+Aj, A+Aj, -A-Aj, -A-Aj, A-Aj, A+Aj, -A-Aj, A-Aj, A+Aj, -A-Aj, A+Aj, -A-Aj, -A+Aj, A-Aj, A-Aj, -A+Aj, -A+Aj, -A+Aj |
| | Polarization 2 | A+Aj, A+Aj, A+Aj, -A-Aj, -A-Aj, -A+Aj, A+Aj, -A-Aj, -A+Aj, A-Aj, -A+Aj, -A-Aj, A+Aj, A-Aj, -A+Aj, -A+Aj, A-Aj, A-Aj, A-Aj |
| 16 | Polarization 1 | A+Aj, A+Aj, A+Aj, -A-Aj, -A-Aj, A-Aj, A+Aj, -A-Aj, A-Aj, -A+Aj, A-Aj, -A-Aj, A+Aj, -A+Aj, A-Aj, A-Aj, -A+Aj, -A+Aj, -A+Aj |
| | Polarization 2 | A+Aj, A+Aj, A+Aj, -A-Aj, -A-Aj, -A+Aj, A+Aj, -A-Aj, -A+Aj, A+Aj, -A-Aj, A+Aj, -A-Aj, A-Aj, - A+Aj, -A+Aj, A-Aj, A-Aj, A-Aj |

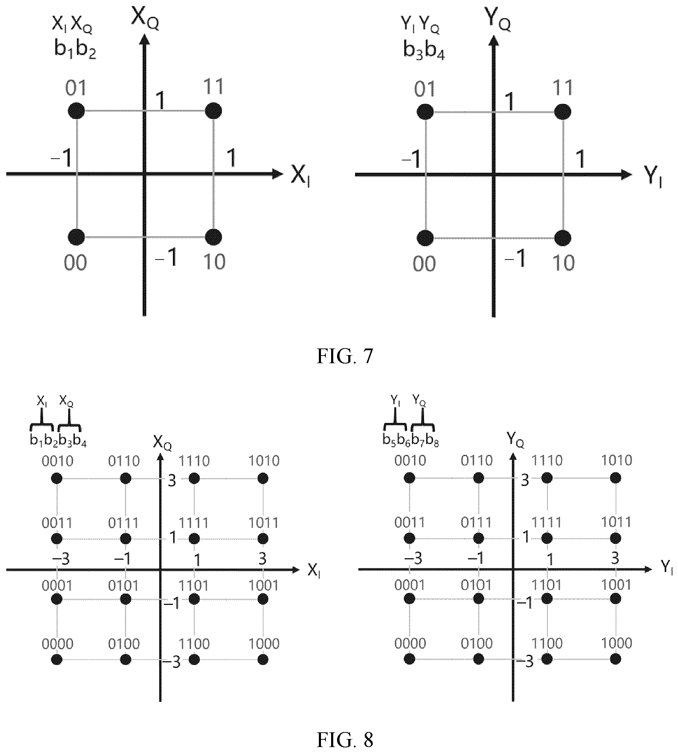

It should be noted that the frame alignment word sequence, the pilot sequence, and the training sequence described above are all provided in the form of symbols. Equivalently, they may be provided in the form of bits. For example, FIG. 7 and FIG. 8 respectively show mapping relationships between a DP-QPSK symbol and a bit, and between a DP-16QAM symbol and a bit. A QPSK symbol consists of two bits. 01 in bits is -1+1j, and 11 is 1+1j. 16QAM consists of four bits. 0000 is -3 to 3j, 1010 is 3+3j, and so on. Taking QPSK as an example, if a sequence is 1+1j, 1+1j, 1-1j, -1+1j, a corresponding bit sequence is 11111001. The bit sequence is subjected to corresponding modulation, and then is converted into a symbol sequence for output.

An embodiment of this application further provides several specific super-frame formats, which are described as follows:

Embodiment 1: Symbols before framing are obtained through CFEC encoding. A quantity of the symbols is 175616. The following table lists parameters $N_{SF}$, $N_{TS}$, $N_{PS}$, $N_{FAW}$, $N_{RES}$, $N_S$, $N_F$, and OH corresponding to the super-frame.

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 49 | 57 | 3648 | 178752 | 1.79% | 24 | 6 | 74 |

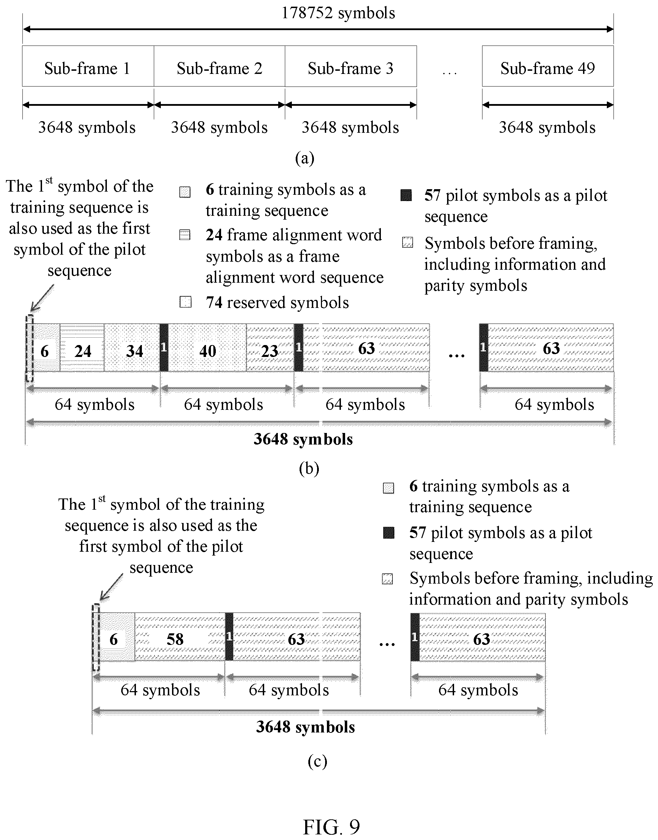

A super-frame structure thereof is shown in FIG. 9. The super-frame includes 49 sub-frames, and each sub-frame includes 3648 symbols, as shown in (a) in FIG. 9. The 1st sub-frame is shown in (b) in FIG. 9, including 6 training symbols, 24 frame alignment word symbols, and 74 reserved symbols. The 2nd to 49th sub-frames each also have 6 training symbols, as shown in (c) in FIG. 9. In addition, in each sub-frame, the 1st symbol in every 64 symbols is a pilot symbol. A frame alignment word sequence with a length of 24 is one item in Table 7. A training sequence with a length of 6 may be one item in Table 31. A pilot sequence with a length of 57, according to the super-frame structure, is one item in Table 10-1 or Table 10-2 of which the 1st symbol is the same as the 1st symbol of the used training sequence. For example, the frame alignment word sequence with a symbol length of 24 is the following sequence:

| Polarization | Frame alignment word sequence |
|---|---|
| X | A+Aj, A-Aj, A+Aj, -A+Aj, A+Aj, -A-Aj. A-Aj, A-Aj, -A+Aj, A+Aj, A+Aj, -A+Aj, A-Aj, A-Aj, -A+Aj, -A-Aj, -A-Aj, A-Aj, A+Aj, -A-Aj, -A-Aj, -A+Aj, -A-Aj, -A+Aj |
| Y | -A-Aj, A-Aj, -A-Aj, -A+Aj, -A-Aj, A+Aj, A-Aj, A-Aj, -A+Aj, -A-Aj, -A-Aj, -A+Aj, A-Aj, A-Aj, -A+Aj, A+Aj, A+Aj, A-Aj, -A-Aj, A+Aj, A+Aj, -A+Aj, A+Aj, -A+Aj |

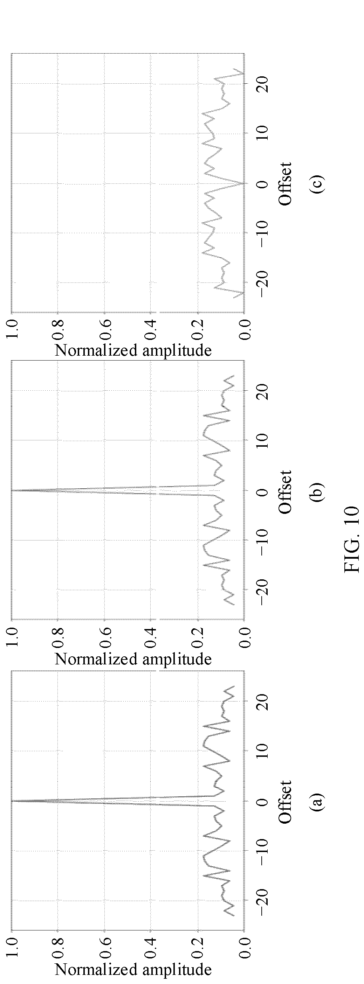

Correlation characteristics corresponding to the frame alignment word sequence are shown in FIG. 10. (a) in FIG. 10 shows an aperiodic autocorrelation result of the frame alignment word sequence in the X polarization direction, (b) in FIG. 10 shows an aperiodic autocorrelation result of the frame alignment word sequence in the Y polarization direction, and (c) in FIG. 10 shows an aperiodic cross-correlation result of the frame alignment word sequence in the X and Y polarization directions. A sidelobe value of an aperiodic autocorrelation function of the symbol sequence in the two polarization directions is not greater than 0.172 (normalized amplitude), and an aperiodic cross-correlation function value of the symbol sequence in the two polarization directions is not greater than 0.177 (normalized amplitude).

The training sequence with a symbol length of 6 is the following sequence:

| Polarization | Training sequence |
|---|---|
| X | -A+Aj, -A+Aj, -A-Aj, A+Aj, A-Aj, A-Aj |
| Y | -A-Aj, -A+Aj, A+Aj, -A-Aj, A-Aj, A+Aj |

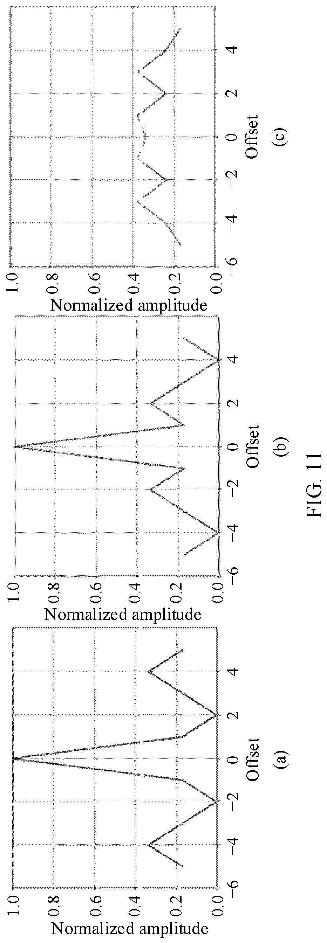

Correlation characteristics corresponding to the training sequence are shown in FIG. 11. (a) in FIG. 11 shows an aperiodic autocorrelation result of the training sequence in the X polarization direction, (b) in FIG. 11 shows an aperiodic autocorrelation result of the training sequence in the Y polarization direction, and (c) in FIG. 11 shows an aperiodic cross-correlation result of the training sequence in the X and Y polarization directions. A sidelobe value of an aperiodic autocorrelation function of the symbol sequence in the two polarization directions is not greater than 0.34 (normalized amplitude), and an aperiodic cross-correlation function value of the symbol sequence in the two polarization directions is not greater than 0.38 (normalized amplitude).

The pilot sequence with a symbol length of 57 is the following sequence:

| Polarization | Pilot sequence |
|---|---|
| X | -A+Aj, -A-Aj, -A+Aj, A-Aj, A+Aj, A-Aj, A+Aj, A+Aj, -A-Aj, A-Aj, A-Aj, -A+Aj, -A+Aj, A+Aj, -A-Aj, -A-Aj, A+Aj, A+Aj, A-Aj, A+Aj, -A-Aj, A-Aj, -A+Aj, A+Aj, A-Aj, A-Aj, A+Aj, A+Aj, A+Aj, -A-Aj, -A+Aj, - A-Aj, A-Aj, -A-Aj, -A-Aj, A+Aj, -A-Aj, -A-Aj, -A-Aj, -A+Aj, -A+Aj, A-Aj, A+Aj, -A+Aj, -A+Aj, -A-Aj, - A+Aj, -A+Aj, -A+Aj, -A+Aj, A-Aj, -A-Aj, A+Aj, A-Aj, -A+Aj, A-Aj, A-Aj |
| Y | -A-Aj, -A+Aj, -A-Aj, A+Aj, A-Aj, A+Aj, A-Aj, A-Aj, -A+Aj, A+Aj, A+Aj, -A-Aj, -A-Aj, A-Aj, -A+Aj, - A+Aj, A-Aj, A-Aj, A+Aj, A-Aj, -A+Aj, A+Aj, -A-Aj, A-Aj, A+Aj, A+Aj, A-Aj, A-Aj, A-Aj, -A+Aj, -A-Aj, - A+Aj, A+Aj, -A+Aj, -A+Aj, A-Aj, -A+Aj, -A+Aj, -A+Aj, -A-Aj, -A-Aj, A+Aj, A-Aj, -A-Aj, -A-Aj, -A+Aj, - A-Aj, -A-Aj, -A-Aj, A+Aj, -A+Aj, A-Aj, A+Aj, -A-Aj, A+Aj, A+Aj |

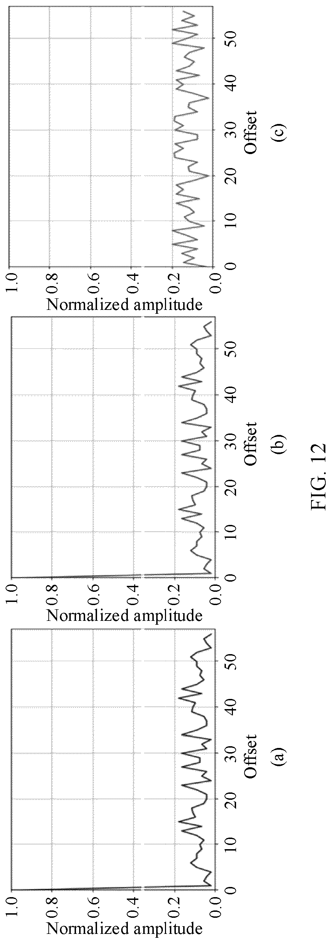

Correlation characteristics corresponding to the pilot sequence are shown in FIG. 12. (a) in FIG. 12 shows a periodic autocorrelation result of the pilot sequence in the X polarization direction, (b) in FIG. 12 shows a periodic autocorrelation result of the pilot sequence in the Y polarization direction, and (c) in FIG. 12 shows a periodic cross-correlation result of the pilot sequence in the X and Y polarization directions. A sidelobe value of a periodic autocorrelation function of the symbol sequence in the two polarization directions is not greater than 0.177 (normalized amplitude), and a periodic cross-correlation function value of the symbol sequence in the two polarization directions is not greater than 0.197 (normalized amplitude). It should be understood that, for the correlation characteristics of the foregoing sequences, a value of A does not affect a normalized amplitude value of a correlation function, that is, the correlation characteristics are independent of a modulation format used. Therefore, when the correlation characteristics of the sequence are verified in this embodiment and the subsequent embodiments, the value of A is not limited, which is not repeated in this application.

It can be learned that a frame overhead of the super-frame structure provided in this embodiment of this application is as low as 1.79%, and the designed sequence has relatively good autocorrelation and cross-correlation characteristics. The frame alignment word sequence can further meet direct current balance, and the training sequence and the pilot sequence can also be combined together to meet direct current balance, which helps improve quality of a signal restored at the receiver end.

Based on received signals in the two polarization directions, the receiver end performs signal processing by using the frame alignment word sequence, the training sequence, and the pilot sequence, to restore the signals. For example, the polarization directions can be distinguished by calculating correlation values between the received signals in the two polarization directions and sequence symbols of the training sequence in the X and Y polarizations respectively, and sub-frame alignment may be performed; super-frame alignment is performed by using the frame alignment word sequence; and carrier phase recovery is performed by using the pilot signal.

In addition, the three symbol sequences in this embodiment may be represented in the form of bit sequences. Taking DP-16QAM and DP-QPSK as an example, the bit sequences may be shown in the following tables, where $b_1$ to $b_8$ are the corresponding bits in FIG. 7 and FIG. 8.

A bit sequence corresponding to the frame alignment word sequence is as follows:

| Index | DP-16QAM $b_1b_2b_3b_4$ $b_5b_6b_7b_8$ | | DP-QPSK $b_1b_2$ $b_3b_4$ | | Index | DP-16QAM $b_1b_2b_3b_4$ $b_5b_6b_7b_8$ | | DP-QPSK $b_1b_2$ $b_3b_4$ | |
|---|---|---|---|---|---|---|---|---|---|
| 1 | 1010 | 0000 | 11 | 00 | 13 | 1000 | 1000 | 10 | 10 |
| 2 | 1000 | 1000 | 10 | 10 | 14 | 1000 | 1000 | 10 | 10 |
| 3 | 1010 | 0000 | 11 | 00 | 15 | 0010 | 0010 | 01 | 01 |
| 4 | 0010 | 0010 | 01 | 01 | 16 | 0000 | 1010 | 00 | 11 |
| 5 | 1010 | 0000 | 11 | 00 | 17 | 0000 | 1010 | 00 | 11 |
| 6 | 0000 | 1010 | 00 | 11 | 18 | 1000 | 1000 | 10 | 10 |
| 7 | 1000 | 1000 | 10 | 10 | 19 | 1010 | 0000 | 11 | 00 |
| 8 | 1000 | 1000 | 10 | 10 | 20 | 0000 | 1010 | 00 | 11 |
| 9 | 0010 | 0010 | 01 | 01 | 21 | 0000 | 1010 | 00 | 11 |
| 10 | 1010 | 0000 | 11 | 00 | 22 | 0010 | 0010 | 01 | 01 |
| 11 | 1010 | 0000 | 11 | 00 | 23 | 0000 | 1010 | 00 | 11 |
| 12 | 0010 | 0010 | 01 | 01 | 24 | 0010 | 0010 | 01 | 01 |

A bit sequence corresponding to the training sequence is as follows:

| Index | DP-16QAM $b_1b_2b_3b_4$ $b_5b_6b_7b_8$ | | DP-QPSK $b_1b_2$ $b_3b_4$ | | Index | DP-16QAM $b_1b_2b_3b_4$ $b_5b_6b_7b_8$ | | DP-QPSK $b_1b_2$ $b_3b_4$ | |
|---|---|---|---|---|---|---|---|---|---|
| 1 | 0000 | 0010 | 00 | 01 | 4 | 0000 | 1010 | 00 | 11 |
| 2 | 0010 | 0010 | 01 | 01 | 5 | 1000 | 1000 | 10 | 10 |
| 3 | 1010 | 0000 | 11 | 00 | 6 | 1010 | 1000 | 11 | 10 |

A bit sequence corresponding to the pilot sequence is as follows:

| Index | DP-16QAM $b_1b_2b_3b_4$ $b_5b_6b_7b_8$ | | DP-QPSK $b_1b_2$ $b_3b_4$ | | Index | DP-16QAM $b_1b_2b_3b_4$ $b_5b_6b_7b_8$ | | DP-QPSK $b_1b_2$ $b_3b_4$ | |
|---|---|---|---|---|---|---|---|---|---|
| 1 | 0010 | 0000 | 01 | 00 | 30 | 0000 | 0010 | 00 | 01 |
| 2 | 0000 | 0010 | 00 | 01 | 31 | 0010 | 0000 | 01 | 00 |
| 3 | 0010 | 0000 | 01 | 00 | 32 | 0000 | 0010 | 00 | 01 |
| 4 | 1000 | 1010 | 10 | 11 | 33 | 1000 | 1010 | 10 | 11 |
| 5 | 1010 | 1000 | 11 | 10 | 34 | 0000 | 0010 | 00 | 01 |
| 6 | 1000 | 1010 | 10 | 11 | 35 | 0000 | 0010 | 00 | 01 |
| 7 | 1010 | 1000 | 11 | 10 | 36 | 1010 | 1000 | 11 | 10 |
| 8 | 1010 | 1000 | 11 | 10 | 37 | 0000 | 0010 | 00 | 01 |
| 9 | 0000 | 0010 | 00 | 01 | 38 | 0000 | 0010 | 00 | 01 |
| 10 | 1000 | 1010 | 10 | 11 | 39 | 0000 | 0010 | 00 | 01 |
| 11 | 1000 | 1010 | 10 | 11 | 40 | 0010 | 0000 | 01 | 00 |
| 12 | 0010 | 0000 | 01 | 00 | 41 | 0010 | : 0000 | 01 | 00 |
| 13 | 0010 | 0000 | 01 | 00 | 42 | 1000 | 1010 | 10 | 11 |
| 14 | 1010 | 1000 | 11 | 10 | 43 | 1010 | 1000 | 11 | 10 |
| 15 | 0000 | 0010 | 00 | 01 | 44 | 0010 | 0000 | 01 | 00 |
| 16 | 0000 | 0010 | 00 | 01 | 45 | 0010 | 0000 | 01 | 00 |

(continued)

| Index | DP-16QAM $b_1b_2b_3b_4$ $b_5b_6b_7b_8$ | | DP-QPSK $b_1b_2$ $b_3b_4$ | | Index | DP-16QAM $b_1b_2b_3b_4$ $b_5b_6b_7b_8$ | | DP-QPSK $b_1b_2$ $b_3b_4$ | |
|---|---|---|---|---|---|---|---|---|---|
| 17 | 1010 | 1000 | 11 | 10 | 46 | 0000 | 0010 | 00 | 01 |
| 18 | 1010 | 1000 | 11 | 10 | 47 | 0010 | 0000 | 01 | 00 |
| 19 | 1000 | 1010 | 10 | 11 | 48 | 0010 | 0000 | 01 | 00 |
| 20 | 1010 | 1000 | 11 | 10 | 49 | 0010 | 0000 | 01 | 00 |
| 21 | 0000 | 0010 | 00 | 01 | 50 | 0010 | 0000 | 01 | 00 |
| 22 | 1000 | 1010 | 10 | 11 | 51 | 1000 | 1010 | 10 | 11 |
| 23 | 0010 | 000 | 01 | 00 | 52 | 0000 | 0010 | 00 | 01 |
| 24 | 1010 | 1000 | 11 | 10 | 53 | 1010 | 1000 | 11 | 10 |
| 25 | 1000 | 1010 | 10 | 11 | 54 | 1000 | 1010 | 10 | 11 |
| 26 | 1000 | 1010 | 10 | 11 | 55 | 0010 | 0000 | 01 | 00 |
| 27 | 1010 | 1000 | 11 | 10 | 56 | 1000 | 1010 | 10 | 11 |
| 28 | 1010 | 1000 | 11 | 10 | 57 | 1000 | 1010 | 10 | 11 |
| 29 | 1010 | 1000 | 11 | 10 | | | | | |

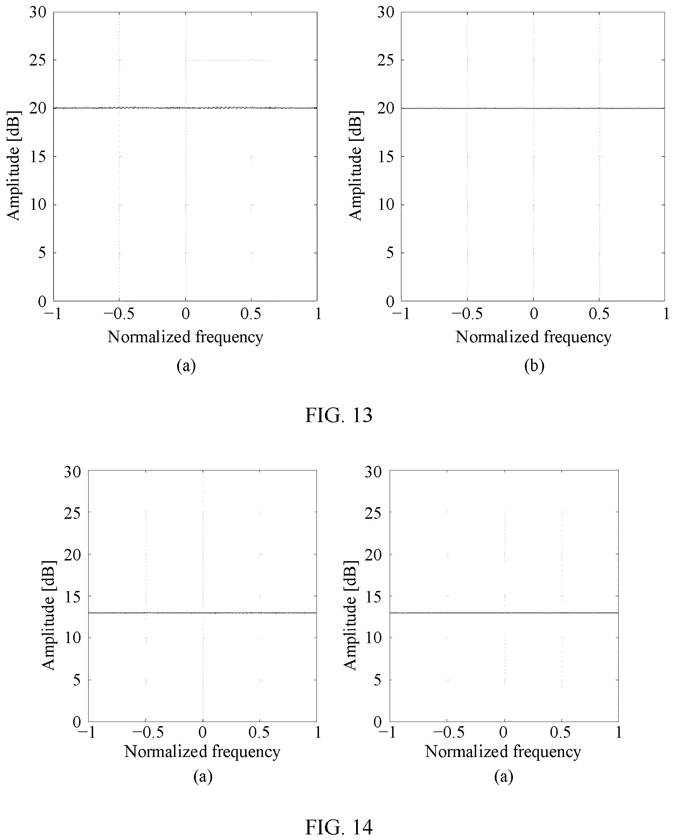

Further, in this embodiment, spectral flatness characteristics of a super-frame in different modulation formats are further simulated. (a) in FIG. 13 provides a spectrum diagram of a super-frame structure shown in FIG. 9 that includes 300 super-frames for DP-16QAM. (b) in FIG. 13 is a spectrum diagram of a random DP-16QAM signal with the same length. (a) in FIG. 14 provides a spectrum **diagram** of the super-frame structure shown in FIG. 9 that includes 300 super-frames for DP-QPSK. (b) in FIG. 14 is a spectrum diagram of a random DP-QPSK signal with the same length. It can be learned that, for not only DP-16QAM bur also DP-QPSK, there is a very small difference between spectral flatness characteristics of the super-frame structure provided in this embodiment and spectral flatness characteristics of a random modulation signal with the same length, as well as very good flatness.

It should be understood that, because spectral flatness characteristics of a signal in the two polarization directions are very similar, in this embodiment of this **application,** only one polarization direction is used as an example to provide a simulation result. The same is true for the subsequent embodiments, which is not repeated in this application.

Embodiment 2: This embodiment of this application further provides a specific super-frame format. Symbols before framing are obtained through CFEC encoding. A quantity of the symbols is 175616. The following table lists parameters $N_{SF}$, $N_{TS}$, $N_{PS}$, $N_{FAW}$, $N_{RES}$, $N_S$, $N_F$, and OH corresponding to the super-frame, and the like.

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 43 | 65 | 4160 | 178880 | 1.86% | 22 | 10 | 60 |

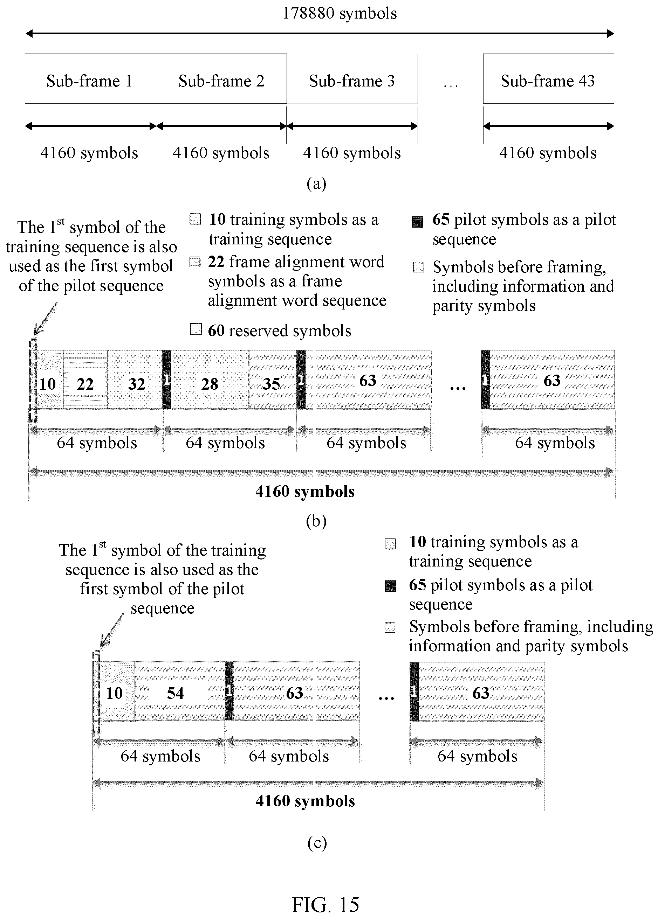

A super-frame structure thereof is shown in FIG. 15. The super-frame includes 43 sub-frames, and each sub-frame includes 4160 symbols, as shown in (a) in FIG. 15. The 1st sub-frame is shown in (b) in FIG. 15, including 10 training symbols, 22 frame alignment word symbols, and 60 reserved symbols. The 2nd to 43rd sub-frames each also have 10 training symbols, as shown in (c) in FIG. 15. In addition, in each sub-frame, the 1st symbol in every 64 symbols is a pilot symbol. A frame alignment word sequence with a length of 22 is one item in Table 6. A training sequence with a length of 10 may be one item in Table 33. A pilot sequence with a length of 65, according to the super-frame structure, is one item in Table 11-1 or Table 11-2 of which the 1st symbol is the same as the 1st symbol of the used training sequence. For example, the frame alignment word sequence with a symbol length of 22 is the following sequence:

| Polarization | Frame alignment word sequence |
|---|---|
| X | A-Aj, A-Aj, A+Aj, -A-Aj, A+Aj, A+Aj, A+Aj, -A+Aj, A-Aj, A-Aj, -A-Aj, A-Aj, A+Aj, -A+Aj, -A-Aj, -A+Aj, -A+Aj, A+Aj, -A-Aj, -A-Aj, -A-Aj, -A+Aj |

(continued)

| Polarization | Frame alignment word sequence |
|---|---|
| Y | A+Aj, -A+Aj, -A+Aj, A+Aj, A-Aj, A-Aj, A+Aj, -A-Aj, -A+Aj, A-Aj, -A+Aj, -A-Aj, A-Aj, -A+Aj, A+Aj, -A+Aj, A-Aj, -A-Aj, A+Aj, A-Aj, -A-Aj, -A-Aj |

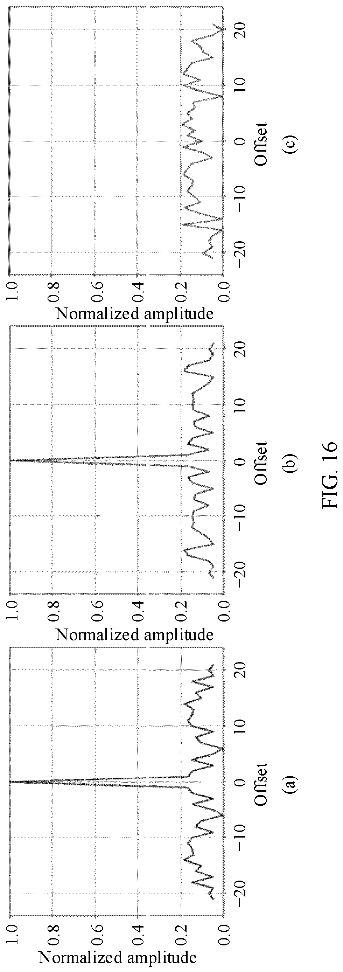

Correlation characteristics corresponding to the frame alignment word sequence are shown in FIG. 16. (a) in FIG. 16 shows an aperiodic autocorrelation result of the frame alignment word sequence in the X polarization direction, (b) in FIG. 16 shows an aperiodic autocorrelation result of the frame alignment word sequence in the Y polarization direction, and (c) in FIG. 16 shows an aperiodic cross-correlation result of the frame alignment word sequence in the X and Y polarization directions. A sidelobe value of an aperiodic autocorrelation function of the symbol sequence in the two polarization directions is not greater than 0.182 (normalized amplitude), and an aperiodic cross-correlation function value of the symbol sequence in the two polarization directions is not greater than 0.188 (normalized amplitude).

In some actual applications, the frame alignment word sequence with a length of 22 may be an existing symbol sequence, for example, a sequence used for OIF-400ZR. However, the sequence has relatively poor cross-correlation in the X polarization and the Y polarization, and the receiver end needs to use more symbols to ensure a sufficiently low alignment error probability during alignment.

The training sequence with a symbol length of 10 is the following sequence:

| Polarization | Training sequence |
|---|---|
| X | -A+Aj, A-Aj, -A+Aj, -A+Aj, -A-Aj, -A-Aj, A+Aj, A+Aj, A-Aj, A-Aj |
| Y | -A-Aj, -A-Aj, -A+Aj, A-Aj, A+Aj, A+Aj, -A-Aj, A+Aj, -A+Aj, A-Aj |

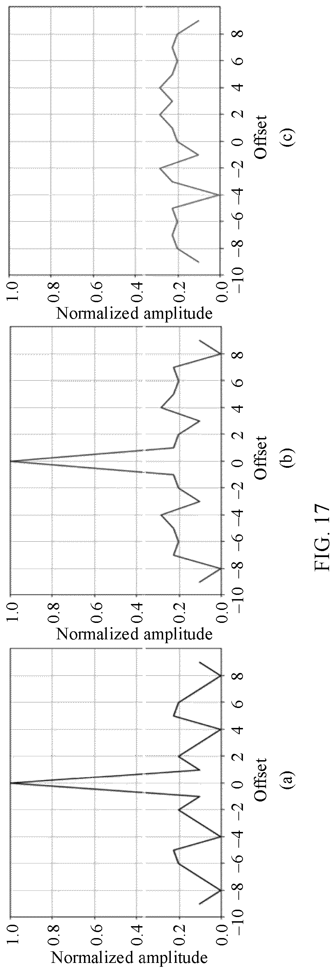

Correlation characteristics corresponding to the training sequence are shown in FIG. 17. (a) in FIG. 17 shows an aperiodic autocorrelation result of the training sequence in the X polarization direction, (b) in FIG. 17 shows an aperiodic autocorrelation result of the training sequence in the Y polarization direction, and (c) in FIG. 17 shows an aperiodic cross-correlation result of the training sequence in the X and Y polarization directions. A sidelobe value of an aperiodic autocorrelation function of the symbol sequence in the two polarization directions is not greater than 0.283 (normalized amplitude), and an aperiodic cross-correlation function value of the symbol sequence in the two polarization directions is not greater than 0.283 (normalized amplitude).

The pilot sequence with a symbol length of 65 is the following sequence:

| Polarization | Pilot sequence |
|---|---|
| X | -A+Aj, A-Aj, -A+Aj, -A+Aj, A+Aj, A+Aj, A+Aj, A-Aj, A+Aj, -A+Aj, -A+Aj, -A+Aj, A-Aj, -A-Aj, A-Aj, A-Aj, A+Aj, A+Aj, -A-Aj, A-Aj, A-Aj, -A+Aj, -A-Aj, -A-Aj, A-Aj, A+Aj, A-Aj, -A+Aj, -A-Aj, A-Aj, -A+Aj, A+Aj, A-Aj, -A-Aj, A+Aj, A+Aj, -A+Aj, A+Aj, -A-Aj, -A+Aj, -A-Aj, A+Aj, -A-Aj, -A+Aj, A-Aj, -A-Aj, - A-Aj, -A+Aj, A+Aj, A+Aj, -A+Aj, -A+Aj, A+Aj, -A+Aj, -A-Aj, A-Aj, A+Aj, -A-Aj, A-Aj, -A-Aj, A-Aj, -A-Aj, -A-Aj, A+Aj, -A-Aj |
| Y | -A-Aj, A+Aj, -A-Aj, -A-Aj, A-Aj, A-Aj, A-Aj, A+Aj, A-Aj, -A-Aj, -A-Aj, -A-Aj, A+Aj, -A+Aj, A+Aj, A+Aj, A-Aj, A-Aj, -A+Aj, A+Aj, A+Aj, -A-Aj, -A+Aj, -A+Aj, A+Aj, A-Aj, A+Aj, -A-Aj, -A+Aj, A+Aj, - A-Aj, A-Aj, A+Aj, -A+Aj, A-Aj, A-Aj, -A-Aj, A-Aj, -A+Aj, -A-Aj, -A+Aj, A-Aj, -A+Aj, -A-Aj, A+Aj, - A+Aj, -A+Aj, -A-Aj, A-Aj, A-Aj, -A-Aj, -A-Aj, A-Aj, -A-Aj, -A+Aj, A+Aj, A-Aj, -A+Aj, A+Aj, -A+Aj, A+Aj, -A+Aj, -A+Aj, A-Aj, -A+Aj |

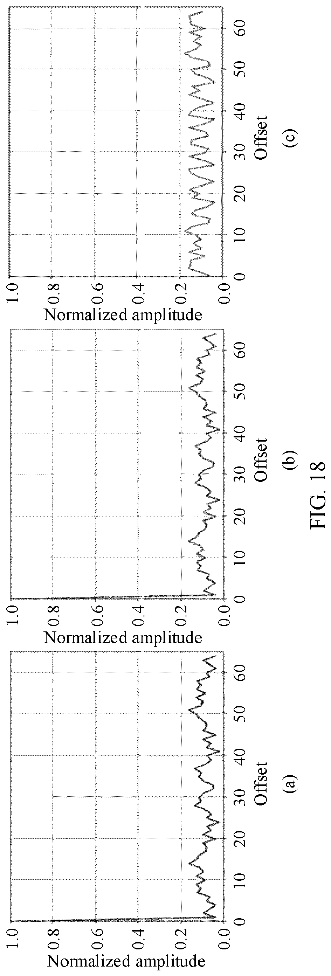

Correlation characteristics corresponding to the pilot sequence are shown in FIG. 18. (a) in FIG. 18 shows a periodic autocorrelation result of the pilot sequence in the X polarization direction, (b) in FIG. 18 shows a periodic autocorrelation result of the pilot sequence in the Y polarization direction, and (c) in FIG. 18 shows a periodic cross-correlation result of the pilot sequence in the X and Y polarization directions. A sidelobe value of a periodic autocorrelation function of the symbol sequence in the two polarization directions is not greater than 0.161 (normalized amplitude), and a periodic cross-correlation function value of the symbol sequence in the two polarization directions is not greater than 0.173 (normalized amplitude).

It can be learned that a frame overhead of the super-frame structure provided in this embodiment of this application is also as low as 1.86%, and the designed sequence has relatively good autocorrelation and cross-correlation characteristics. The frame alignment word sequence can further meet direct current balance, and the training sequence and the pilot sequence can also be combined together to meet direct current balance, which helps improve quality of a signal restored at the receiver end.

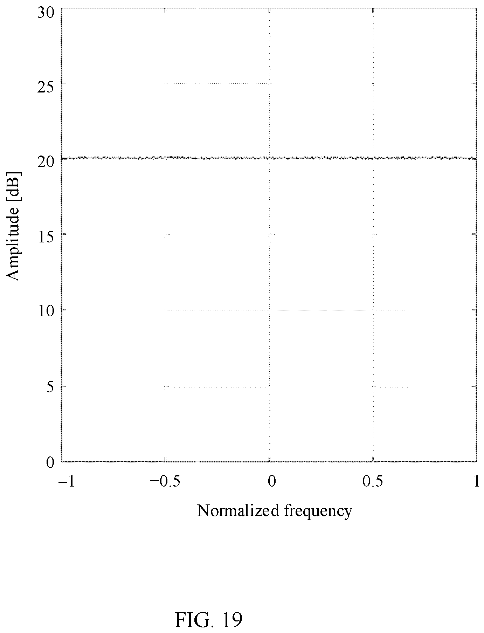

Further, in this embodiment, taking DP-16QAM as an example, spectral flatness characteristics of a super-frame are further simulated. A result is shown in FIG. 19, which uses a spectrum diagram of the super-frame structure shown in FIG. 15 that includes 300 super-frames. It can be learned that there is a very small difference between spectral flatness characteristics of the super-frame structure provided in this embodiment and spectral flatness characteristics of a random modulation signal with the same length, as well as very good flatness.

Embodiment 3: This embodiment of this application further provides a specific super-frame format. Symbols before framing are obtained through CFEC encoding. A quantity of the symbols is 175616. The following table lists parameters $N_{SF}$, $N_{TS}$, $N_{PS}$, $N_{FAW}$, $N_{RES}$, $N_S$, $N_F$, and OH corresponding to the super-frame, and the like.

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 50 | 56 | 3584 | 179200 | 2.04% | 22 | 15 | 62 |

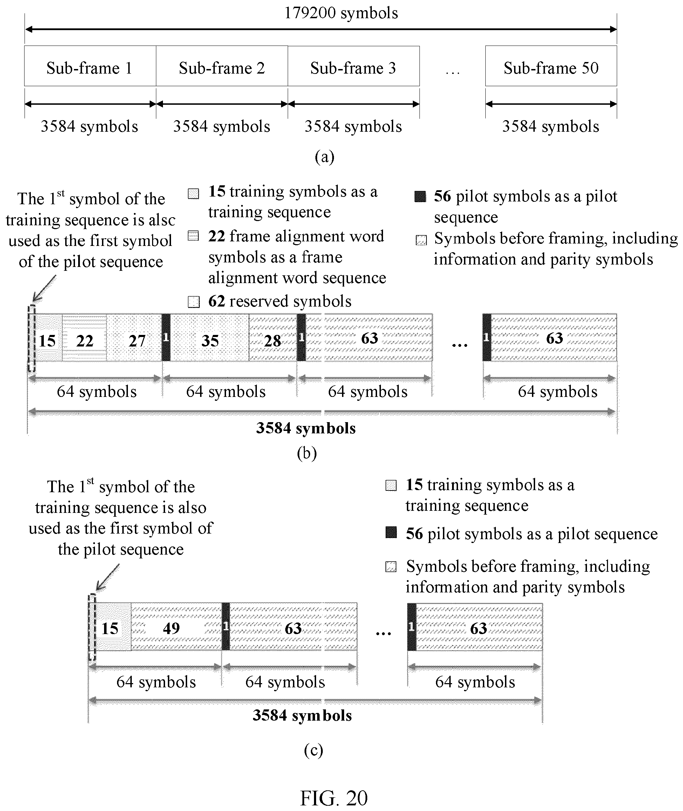

A super-frame structure thereof is shown in FIG. 20. The super-frame includes 50 sub-frames, and each sub-frame includes 3584 symbols, as shown in (a) in FIG. 20. The 1st sub-frame is shown in (b) in FIG. 20, including 15 training symbols, 22 frame alignment word symbols, and 62 reserved symbols. The 2nd to 50th sub-frames each also have 15 training symbols, as shown in (c) in FIG. 20. In addition, in each sub-frame, the 1st symbol in every 64 symbols is a pilot symbol. A frame alignment word sequence with a length of 22 is one item in Table 6. A training sequence with a length of 15 may be one item in Table 42. A pilot sequence with a length of 56, according to the super-frame structure, is one item in Table 9-1 or Table 9-2 of which the 1st symbol is the same as the 1st symbol of the used training sequence. For example, considering that the frame alignment word sequence with a symbol length of 22 uses the same sequence as that in Embodiment 2, a correlation simulation result corresponding to the frame alignment word sequence is shown in FIG. 16.

The training sequence with a symbol length of 15 uses the following sequence:

| Polarization | Training sequence |
|---|---|
| X | -A+Aj, A-Aj, -A-Aj, -A-Aj, A+Aj, -A+Aj, A-Aj, A+Aj, A-Aj, -A+Aj, A+Aj, A-Aj, -A+Aj, -A+Aj, -A-Aj |
| Y | -A-Aj, -A-Aj, -A+Aj, A-Aj, A+Aj, -A+Aj, -A+Aj, -A-Aj, A+Aj, -A-Aj, A+Aj, A-Aj, -A-Aj, A-Aj, A+Aj |

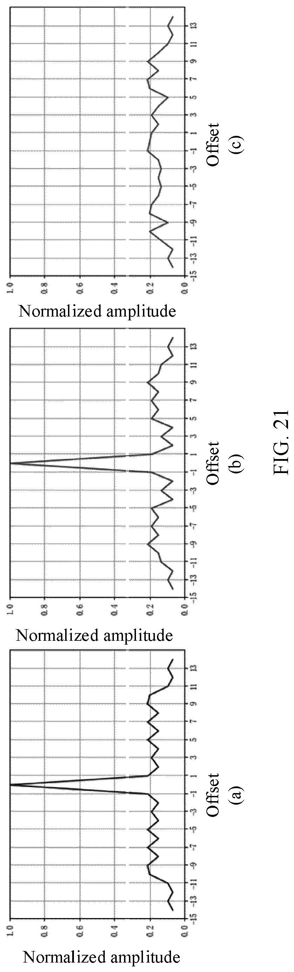

Correlation characteristics corresponding to the training sequence are shown in FIG. 21. (a) in FIG. 21 shows an aperiodic autocorrelation result of the training sequence in the X polarization direction, (b) in FIG. 21 shows an aperiodic autocorrelation result of the training sequence in the Y polarization direction, and (c) in FIG. 21 shows an aperiodic cross-correlation result of the training sequence in the X and Y polarization directions. A sidelobe value of an aperiodic autocorrelation function of the symbol sequence in the two polarization directions is not greater than 0.211 (normalized amplitude), and an aperiodic cross-correlation function value of the symbol sequence in the two polarization directions is not greater than 0.211 (normalized amplitude).

The pilot sequence with a symbol length of 56 uses the following sequence:

| Polarization | Pilot sequence |
|---|---|
| X | -A+Aj, A+Aj, -A+Aj, A+Aj, -A-Aj, A+Aj, A+Aj, -A-Aj, -A-Aj, A-Aj, -A-Aj, -A-Aj, A-Aj, A-Aj, -A+Aj, - A+Aj, -A+Aj, A-Aj, -A+Aj, -A-Aj, A+Aj, -A-Aj, -A+Aj, -A-Aj, A-Aj, -A-Aj, A-Aj, A+Aj, -A+Aj, A-Aj, A-Aj, -A+Aj, A+Aj, -A-Aj, -A+Aj, A-Aj, A+Aj, A+Aj, -A+Aj, -A-Aj, -A+Aj, A+Aj, A+Aj, -A-Aj, A-Aj, A+Aj, A+Aj, A+Aj, -A+Aj, A-Aj, -A-Aj, -A-Aj, -A-Aj, A+Aj, A-Aj, A-Aj |
| Y | -A-Aj, A-Aj, -A-Aj, A-Aj, -A+Aj, A-Aj, A-Aj, -A+Aj, -A+Aj, A+Aj, -A+Aj, -A+Aj, A+Aj, A+Aj, -A-Aj, -A-Aj, -A-Aj, A+Aj, -A-Aj, -A+Aj, A-Aj, -A+Aj, -A-Aj, -A+Aj, A+Aj, -A+Aj, A+Aj, A-Aj, -A-Aj, A+Aj, A+Aj, -A-Aj, A-Aj, -A+Aj, -A-Aj, A+Aj, A-Aj, A-Aj, -A-Aj, -A+Aj, -A-Aj, A-Aj, A-Aj, -A+Aj, A+Aj, A-Aj, A-Aj, A-Aj, -A-Aj, A+Aj, -A+Aj, -A+Aj, -A+Aj, A-Aj, A+Aj, A+Aj |

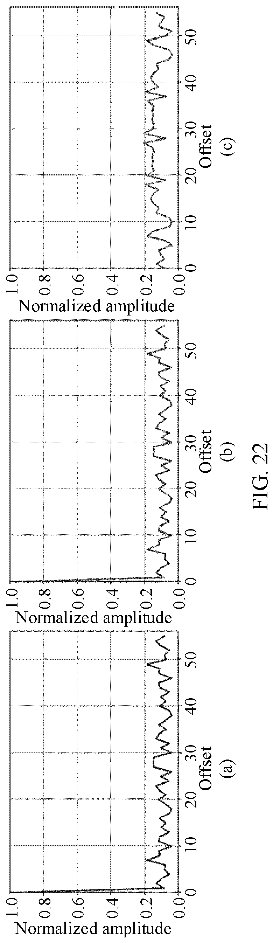

Correlation characteristics corresponding to the pilot sequence are shown in FIG. 22. (a) in FIG. 22 shows a periodic autocorrelation result of the pilot sequence in the X polarization direction, (b) in FIG. 22 shows a periodic autocorrelation result of the pilot sequence in the Y polarization direction, and (c) in FIG. 22 shows a periodic cross-correlation result of the pilot sequence in the X and Y polarization directions. A sidelobe value of a periodic autocorrelation function of the symbol sequence in the two polarization directions is not greater than 0.183 (normalized amplitude), and a periodic cross-correlation function value of the symbol sequence in the two polarization directions is not greater than 0.203 (normalized amplitude).

It can be learned that a frame overhead of the super-frame structure provided in this embodiment of this application is also as low as 2.03%; the training sequence is relatively long, so that the receiver end performs frame alignment; and the designed sequence has relatively good autocorrelation and cross-correlation characteristics. The frame alignment word sequence can further meet direct current balance, and the training sequence and the pilot sequence can also be combined together to meet direct current balance, which helps improve quality of a signal restored at the receiver end.

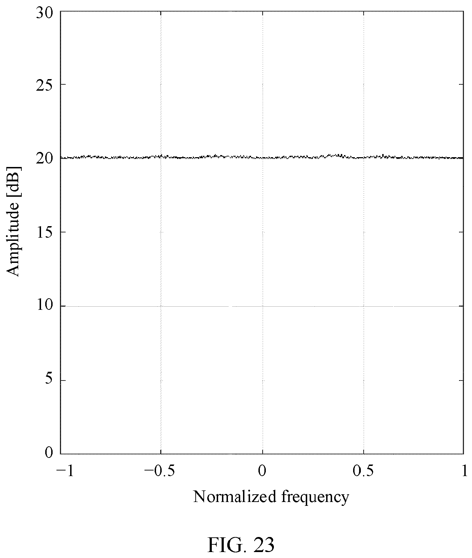

Further, in this embodiment, taking DP-16QAM as an example, spectral flatness characteristics of a super-frame are further simulated. A result is shown in FIG. 23, which uses a spectrum diagram of the super-frame structure shown in FIG. 20 that includes 300 super-frames. It can be learned that there is a very small difference between spectral flatness characteristics of the super-frame structure provided in this embodiment and spectral flatness characteristics of a random modulation signal with the same length, as well as very good flatness.

Embodiment 4: This embodiment of this application provides a specific super-frame format. Symbols before framing are obtained through open FEC (Open FEC, OFEC) encoding. A quantity of the symbols is 172032. The following table lists parameters $N_{SF}$, $N_{TS}$, $N_{PS}$, $N_{FAW}$, $N_{RES}$, $N_S$, $N_F$, and OH corresponding to the super-frame, and the like.

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 48 | 57 | 3648 | 175104 | 1.79% | 24 | 6 | 72 |

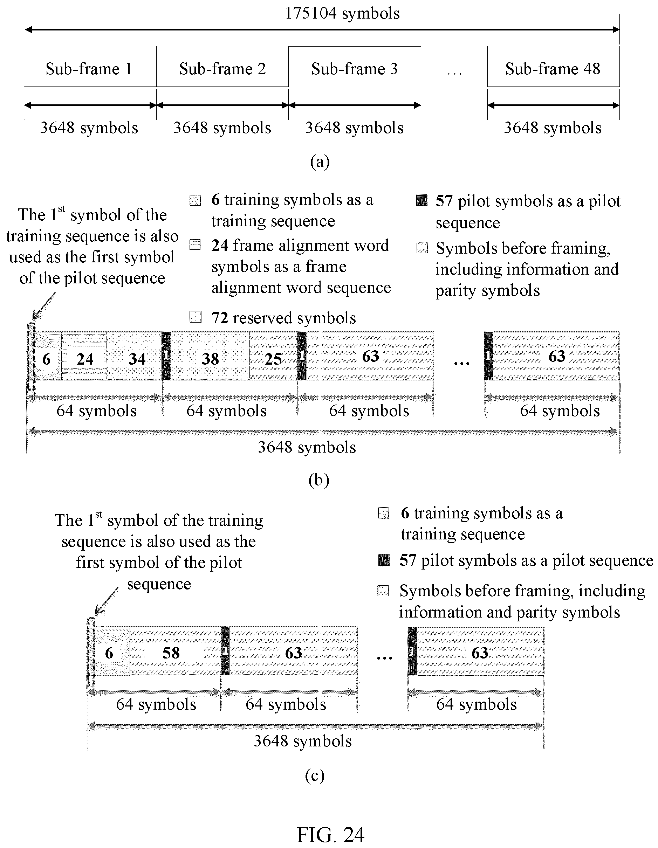

A super-frame structure thereof is shown in FIG. 24. The super-frame includes 48 sub-frames, and each sub-frame includes 3648 symbols, as shown in (a) in FIG. 24. The 1st sub-frame is shown in (b) in FIG. 24, including 6 training symbols, 24 frame alignment word symbols, and 72 reserved symbols. The 2nd to 48th sub-frames each also have 6 training symbols, as shown in (c) in FIG. 24. In addition, in each sub-frame, the 1st symbol in every 64 symbols is a pilot symbol. A frame alignment word sequence with a length of 24 is one item in Table 7. A training sequence with a length of 6 may be one item in Table 31. A pilot sequence with a length of 57, according to the super-frame structure, is one item in Table 10-1 or Table 10-2 of which the 1st symbol is the same as the 1st symbol of the used training sequence. For example, the same frame alignment word sequence, training sequence, and pilot sequence as those in Embodiment 1 are used, and correlations thereof are respectively shown in FIG. 10 to FIG. 12.

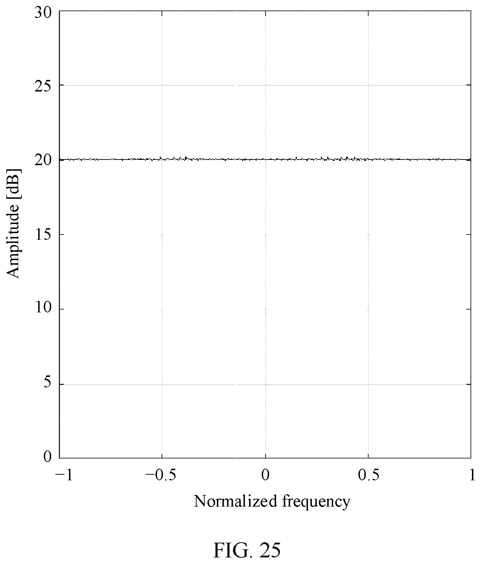

Further, in this embodiment, taking DP-16QAM as an example, spectral flatness characteristics of a super-frame are further simulated. A result is shown in FIG. 25, which uses a spectrum diagram of the super-frame structure shown in FIG. 24 that includes 300 super-frames. It can be learned that there is a very small difference between spectral flatness characteristics of the super-frame structure provided in this embodiment and spectral flatness characteristics of a random modulation signal with the same length, as well as very good flatness.

Embodiment 5: This embodiment of this application provides a specific super-frame format. Symbols before framing are obtained through CFEC encoding. A quantity of the symbols is 175616. The following table lists parameters $N_{SF}$, $N_{TS}$, $N_{PS}$, $N_{FAW}$, $N_{RES}$, $N_S$, $N_F$, and OH corresponding to the super-frame, and the like.

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 50 | 75 | 3600 | 180000 | 2.50% | 22 | 12 | 62 |

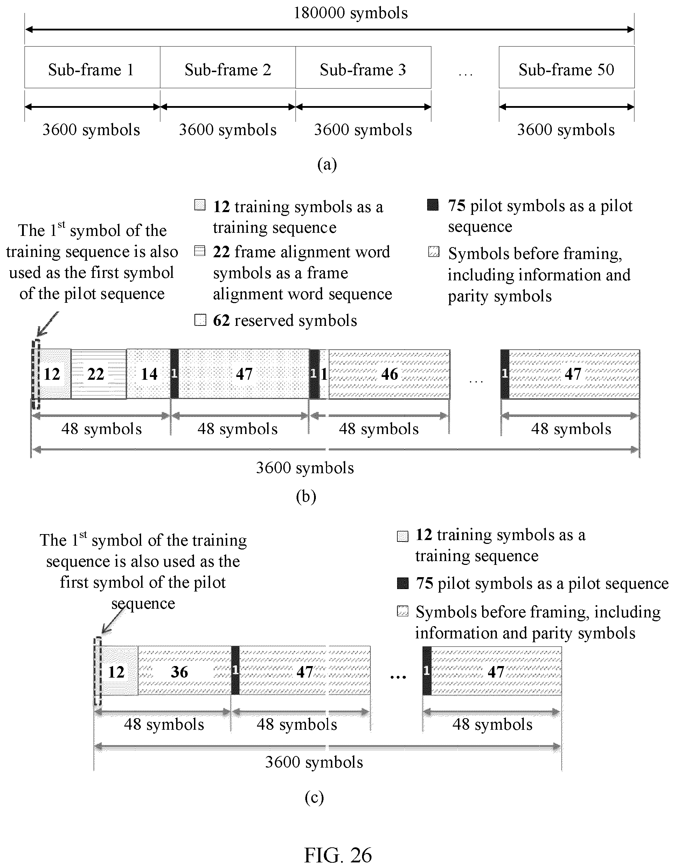

A super-frame structure thereof is shown in FIG. 26. The super-frame includes 50 sub-frames, and each sub-frame includes 3600 symbols, as shown in (a) in FIG. 26. The 1st sub-frame is shown in (b) in FIG. 26, including 12 training symbols, 22 frame alignment word symbols, and 62 reserved symbols. The 2nd to 50th sub-frames each also have 12 training symbols, as shown in (c) in FIG. 26. In addition, in each sub-frame, the 1st symbol in every 48 symbols is a pilot symbol. A frame alignment word sequence with a length of 22 is one item in Table 6. A training sequence with a length of 12 may be one item in Table 34. A pilot sequence with a length of 75, according to the super-frame structure, is one item in Table 26 of which the 1st symbol is the same as the 1st symbol of the used training sequence. For example, considering that the frame alignment word sequence with a symbol length of 22 uses the same sequence as that in Embodiment 2, a correlation simulation result corresponding to the frame alignment word sequence is shown in FIG. 16.

The training sequence with a symbol length of 12 uses the following sequence:

| Polarization | Training sequence |
|---|---|
| X | -A+Aj, -A-Aj, -A-Aj, A+Aj, A-Aj, A+Aj, A+Aj, -A+Aj, A-Aj, A-Aj, -A+Aj, -A-Aj |

(continued)

| Polarization | Training sequence |
|---|---|
| Y | -A-Aj, -A+Aj, A-Aj, -A+Aj, -A-Aj, A-Aj, -A-Aj, -A+Aj, A+Aj, A+Aj, A-Aj, A+Aj |

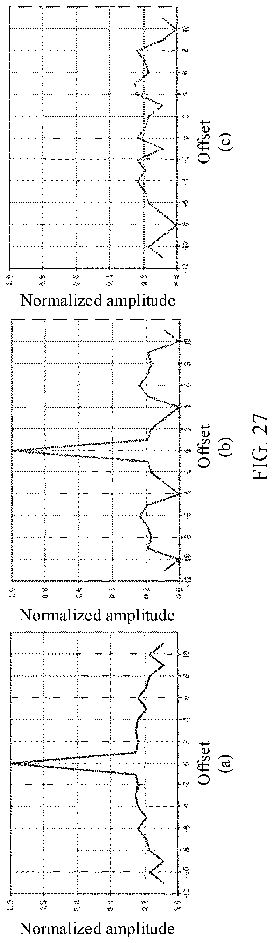

Correlation characteristics corresponding to the training sequence are shown in FIG. 27. (a) in FIG. 27 shows an aperiodic autocorrelation result of the training sequence in the X polarization direction, (b) in FIG. 27 shows an aperiodic autocorrelation result of the training sequence in the Y polarization direction, and (c) in FIG. 27 shows an aperiodic cross-correlation result of the training sequence in the X and Y polarization directions. A sidelobe value of an aperiodic autocorrelation function of the symbol sequence in the two polarization directions is not greater than 0.251 (normalized amplitude), and an aperiodic cross-correlation function value of the symbol sequence in the two polarization directions is not greater than 0.251 (normalized amplitude).

The pilot sequence with a symbol length of 75 uses the following sequence:

| Polarization | Pilot sequence |
|---|---|
| X | -A+Aj, -A-Aj, A+Aj, A-Aj, A-Aj, A+Aj, -A+Aj, -A+Aj, A+Aj, A-Aj, -A+Aj, -A+Aj, A+Aj, -A+Aj, -A-Aj, A-Aj, -A-Aj, -A+Aj, -A-Aj, A+Aj, -A+Aj, A+Aj, -A-Aj, A-Aj, -A+Aj, A+Aj, A+Aj, -A-Aj, A+Aj, A+Aj, -A-Aj, -A-Aj, A-Aj, A+Aj, A+Aj, A-Aj, A+Aj, A-Aj. A+Aj, -A+Aj, A-Aj, A-Aj, -A+Aj, A-Aj, -A+Aj, A+Aj, -A-Aj, - A+Aj, -A-Aj, -A-Aj, -A-Aj, -A-Aj, A+Aj, A-Aj, -A+Aj, A-Aj, A-Aj, A-Aj, A+Aj, A-Aj, -A-Aj, -A-Aj, -A+Aj, -A+Aj, -A+Aj, A-Aj, -A-Aj, A-Aj, A-Aj, -A+Aj, -A+Aj, -A-Aj, -A-Aj, A+Aj, -A+Aj |
| Y | -A-Aj, -A+Aj, A-Aj, A+Aj, A+Aj, A-Aj, -A-Aj, -A-Aj, A-Aj, A+Aj, -A-Aj, -A-Aj, A-Aj, -A-Aj, -A+Aj, A+Aj, -A+Aj, -A-Aj, -A+Aj, A-Aj, -A-Aj, A-Aj, -A+Aj, A+Aj, -A-Aj, A-Aj, A-Aj, -A+Aj, A-Aj, A-Aj, -A+Aj, - A+Aj, A+Aj, A-Aj, A-Aj, A+Aj, A-Aj, A+Aj, A-Aj, -A-Aj, A+Aj, A+Aj, -A-Aj, A+Aj, -A-Aj, A-Aj, -A+Aj, - A-Aj, -A+Aj, -A+Aj, -A+Aj, -A+Aj, A-Aj, A+Aj, -A-Aj, A+Aj, A+Aj, A+Aj, A-Aj, A+Aj, -A+Aj, -A+Aj, -A-Aj, -A-Aj, -A-Aj, A+Aj, -A+Aj, A+Aj, A+Aj. -A-Aj, -A-Aj, -A+Aj, -A+Aj, A-Aj, -A-Aj |

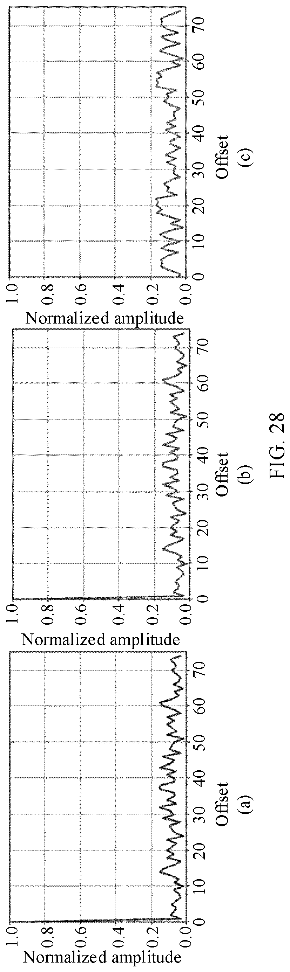

Correlation characteristics corresponding to the pilot sequence are shown in FIG. 28. (a) in FIG. 28 shows a periodic autocorrelation result of the pilot sequence in the X polarization direction, (b) in FIG. 28 shows a periodic autocorrelation result of the pilot sequence in the Y polarization direction, and (c) in FIG. 28 shows a periodic cross-correlation result of the pilot sequence in the X and Y polarization directions. A sidelobe value of a periodic autocorrelation function of the symbol sequence in the two polarization directions is not greater than 0.150 (normalized amplitude), and a periodic cross-correlation function value of the symbol sequence in the two polarization directions is not greater than 0.168 (normalized amplitude).

A frame overhead of the super-frame structure provided in this embodiment of this application is also as low as 2.50%, and the designed sequence has relatively good autocorrelation and cross-correlation characteristics. The frame alignment word sequence can further meet direct current balance, and the training sequence and the pilot sequence can also be combined together to meet direct current balance, which helps improve quality of a signal restored at the receiver end.

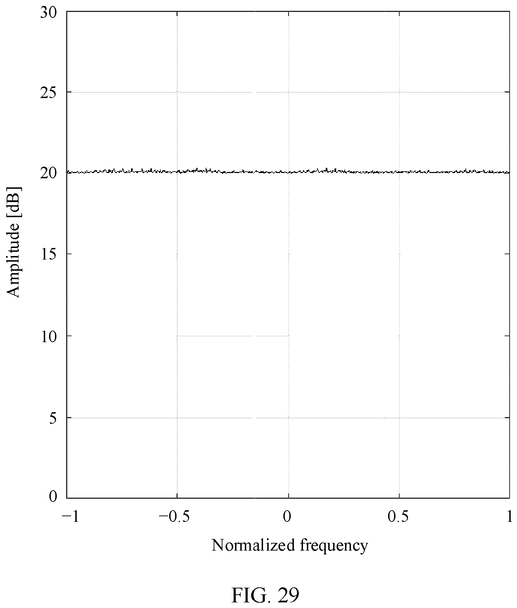

Further, in this embodiment, taking DP-16QAM as an example, spectral flatness characteristics of a super-frame are further simulated. A result is shown in FIG. 29, which uses a spectrum diagram of the super-frame structure shown in FIG. 26 that includes 300 super-frames. It can be learned that there is a very small difference between spectral flatness characteristics of the super-frame structure provided in this embodiment and spectral flatness characteristics of a random modulation signal with the same length, as well as very good flatness.

Embodiment 6: This embodiment of this application provides a specific super-frame format. Symbols before framing are obtained through OFEC encoding. A quantity of the symbols is 172032. The following table lists parameters $N_{SF}$, $N_{TS}$, $N_{PS}$, $N_{FAW}$, $N_{RES}$, $N_S$, $N_F$, OH, and the like corresponding to the super-frame.

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 49 | 75 | 3600 | 176400 | 2.54% | 22 | 12 | 132 |

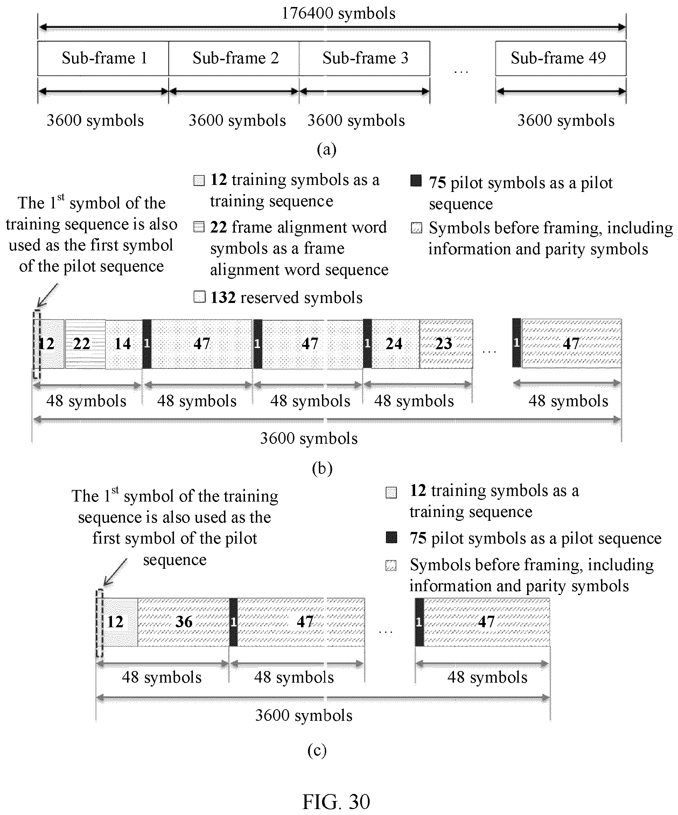

A super-frame structure thereof is shown in FIG. 30. The super-frame includes 49 sub-frames, and each sub-frame includes 3600 symbols, as shown in (a) in FIG. 30. The 1st sub-frame is shown in (b) in FIG. 30, including 12 training symbols, 22 frame alignment word symbols. and 132 reserved symbols. The 2nd to 49th sub-frames each also have 12 training symbols, as shown in (c) in FIG. 30. In addition, in each sub-frame, the 1st symbol in every 48 symbols is a pilot symbol. A frame alignment word sequence with a length of 22 is one item in Table 6. A training sequence with a length of 12 may be one item in Table 34. A pilot sequence with a length of 75, according to the super-frame structure, is one item in Table 26 of which the 1st symbol is the same as the 1st symbol of the used training

sequence. For example, the same frame alignment word sequence, training sequence, and pilot sequence as those in Embodiment 5 are used, and correlations thereof are respectively shown in FIG. 16, FIG. 27, and FIG. 28.

A frame overhead of the super-frame structure provided in this embodiment of this application is also as low as 2.54%, and the designed sequence has relatively good autocorrelation and cross-correlation characteristics. The frame alignment word sequence can further meet direct current balance, and the training sequence and the pilot sequence can also be combined together to meet direct current balance, which helps improve quality of a signal restored at the receiver end.

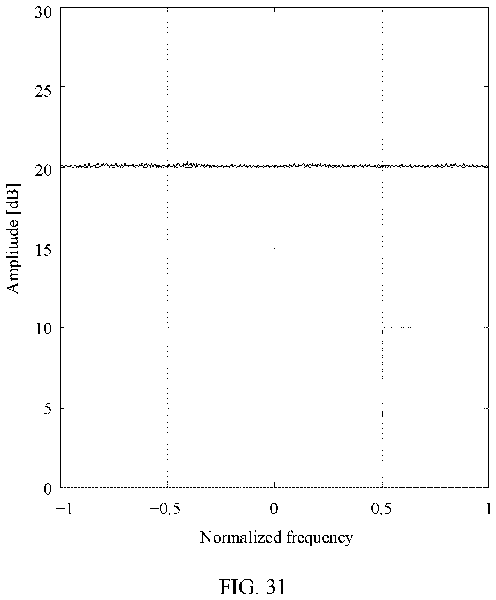

Further, in this embodiment, taking DP-16QAM as an example, spectral flatness characteristics of a super-frame are further simulated. A result is shown in FIG. 31, which uses a spectrum diagram of the super-frame structure shown in FIG. 30 that includes 300 super-frames. It can be learned that there is a very small difference between spectral flatness characteristics of the super-frame structure provided in this embodiment and spectral flatness characteristics of a random modulation signal with the same length, as well as very good flatness.

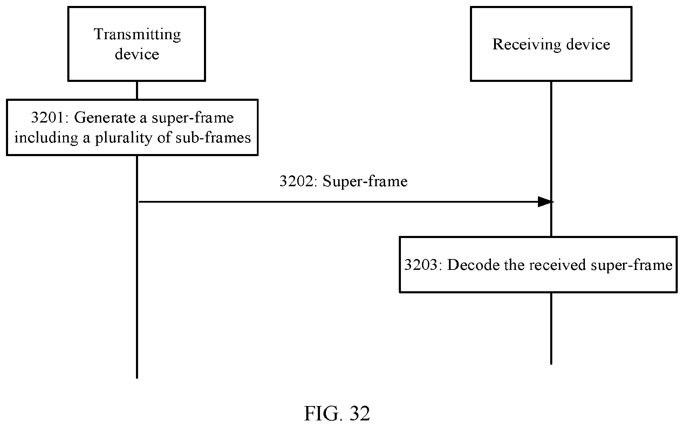

With reference to the communication system described in the foregoing embodiment corresponding to FIG. 1 and the framing process described in the embodiment corresponding to FIG. 2 or FIG. 3, an embodiment of this application further provides another transmission method for optical communication. As shown in FIG. 32, the transmission method includes the following steps.

3201: A transmitting device generates a super-frame including a plurality of sub-frames, each of which includes training symbols and pilot symbols, where in one polarization direction, there is one symbol that is both a training symbol and a pilot symbol, and each of the training symbols and the pilot symbols is one of -A-Aj, -A+Aj, A-Aj, and A+Aj, A being a real number; in each sub-frame, in the one polarization direction, the pilot symbols are generated based on a target polynomial and a seed, there are $N_{PS}$ pilot symbols combined with $N_{TS}$ training symbols to achieve direct current balance, $N_{TS}$ is a quantity of the training symbols in each sub-frame in one polarization direction, and $N_{TS}+N_{PS}$ is an odd number; and the target polynomial is one item in the following Table X-1.

**Table X-1**

| Index | Target polynomial |
|---|---|
| 1 | $x^{10}+x^9+x^8+x^7+x^6+1$ |
| 2 | $x^{10}+x^9+x^8+x^6+x^4+1$ |
| 3 | $x^{10}+x^9+x^7+x^6+x^4+1$ |
| 4 | $x^{10}+x^9+x^6+x^3+1$ |
| 5 | $x^{10}+x^8+x^5+x^3+1$ |
| 6 | $x^{10}+x^8+x^6+x^5+x^3+1$ |
| 7 | $x^{10}+x^8+x^7+x^4+x^3+1$ |
| 8 | $x^{10}+x^6+x^5+x^4+x^3+1$ |
| 9 | $x^{10}+x^9+x^6+x^2+1$ |
| 10 | $x^{10}+x^7+x^6+x^2+1$ |
| 11 | $x^{10}+x^7+x^5+x^2+1$ |
| 12 | $x^{10}+x^8+x^7+x^5+x^2+1$ |
| 13 | $x^{10}+x^9+x^8+x^7+x^4+x^2+1$ |
| 14 | $x^{10}+x^7+x^5+x^4+x^2+1$ |
| 15 | $x^{10}+x^9+x^7+x^5+x^4+x^2+1$ |
| 16 | $x^{10}+x^9+x^8+x^3+x^2+1$ |
| 17 | $x^{10}+x^9+x^8+x^7+x^3+x^2+1$ |
| 18 | $x^{10}+x^7+x^6+x^3+x^2+1$ |
| 19 | $x^{10}+x^8+x^5+x+1$ |
| 20 | $x^{10}+x^8+x^4+x+1$ |

(continued)

| Index | Target polynomial |
|-------|-------------------|
| 21 | $x^{10}+x^9+x^8+x^7+x^4+x+1$ |
| 22 | $x^{10}+x^8+x^5+x^4+x+1$ |
| 23 | $x^{10}+x^5+x^3+x+1$ |
| 24 | $x^{10}+x^8+x^6+x^5+x^3+x+1$ |
| 25 | $x^{10}+x^9+x^8+x^7+x^4+x^3+x+1$ |
| 26 | $x^{10}+x^6+x^4+x^3+x+1$ |
| 27 | $x^{10}+x^8+x^7+x^2+x+1$ |
| 28 | $x^{10}+x^9+x^8+x^7+x^4+x^2+x+1$ |
| 29 | $x^{10}+x^9+x^6+x^3+x^2+x+1$ |
| 30 | $x^{10}+x^8+x^6+x^3+x^2+x+1$ |
| 31 | $x^{10}+x^6+x^5+x^3+x^2+x+1$ |
| 32 | $x^{10}+x^4+x^3+x^2+x+1$ |
| 33 | $x^{10}+x^9+x^7+x^3+1$ |
| 34 | $x^{10}+x^9+x^6+x+1$ |
| 35 | $x^{10}+x^9+x^4+x+1$ |
| 36 | $x^{10}+x^7+x^3+x+1$ |

3202: The transmitting device transmits the super-frame, and correspondingly, a receiving device receives the super-frame including the plurality of sub-frames.

3203: The receiving device decodes the received super-frame.

In this embodiment of this application, a value of A is determined by a modulation format used when a symbol is generated, which can be understood by referring to the corresponding content in embodiments of FIG. 4 and FIG. 5A. It should be noted that, in some actual application scenarios, the pilot symbols and the training symbols, -A-Aj, -A+Aj, A-Aj, and A+Aj, may not be symbols in a constellation diagram of the used modulation format, and may be four symbols in a middle area between the outermost four symbols and the innermost four symbols in the constellation diagram. In this case, the training symbols and the pilot symbols have fair noise and sensitivity, but have a relatively low peak-to-average power ratio. Taking 16QAM as an example, values of the 16 symbols in the 16QAM constellation diagram are $\{\pm1 \pm 1j, \pm1 \pm 3j, \pm3 \pm 1j, \pm3 \pm 3j\}$, and a value of the real number A meets $1 \le A \le 3$. More specifically, as shown in FIG. 5B, the outermost four symbols in the constellation diagram are 3 + 3j, 3 - 3j, -3 + 3j, and -3 - 3j, and the innermost four symbols in the constellation diagram are 1 + 1j, 1 - 1j, -1 + 1j, and -1 - 1j. The values of the pilot symbols and the training symbols, -A-Aj, -A+Aj, A-Aj, and A+Aj, may be four symbols in the middle area between the outermost four symbols and the innermost four symbols in the 16QAM constellation diagram. A specific value of the real number A may be selected according to an actual application scenario, so that the peak-to-average power ratio, noise, and sensitivity of the training symbols and the pilot symbols have a good compromise. For example, the real number $A = \sqrt{5}$, and the values of the pilot symbols and the training symbols are $\{-\sqrt{5} - \sqrt{5}j, -\sqrt{5} + \sqrt{5}j, \sqrt{5} - \sqrt{5}j, \sqrt{5} + \sqrt{5}j\}$. In addition, when the 16 symbols in the 16QAM constellation diagram are subjected to power normalization and have values of $\{\pm1/\sqrt{10} \pm 1/\sqrt{10}j, \pm1/\sqrt{10} \pm 3/\sqrt{10}j, \pm3/\sqrt{10} \pm 1/\sqrt{10}j, \pm3/\sqrt{10} \pm 3/\sqrt{10}j\}$, the value of the real number A meets $1/\sqrt{10} \le A \le 3/\sqrt{10}$. For example, the real number $A = \sqrt{2}/2$, and the values of the pilot symbols and the training symbols are $\{-\sqrt{2}/2 - \sqrt{2}/2j, -\sqrt{2}/2 + \sqrt{2}/2j, \sqrt{2}/2 - \sqrt{2}/2j, \sqrt{2}/2 + \sqrt{2}/2j\}$

In addition, in this embodiment of this application, there are two polarization directions, and the two polarization directions are orthogonal to each other. In other words, when one polarization direction is the X polarization, the other polarization direction is the Y polarization; and when one polarization direction is the Y polarization, the other polarization direction is the X polarization. The two polarization directions may also be described by a polarization 1 and a polarization 2. In this embodiment of this application, in one polarization direction, a sum of quantities of training symbols and pilot symbols included in one sub-frame is $N_{TS}+N_{PS}-1$. Because one symbol is both a training symbol and a pilot symbol, the sum of quantities is not $N_{TS}+N_{PS}$, and is one less than the sum of quantities of the two types of symbols.

In the solution of this embodiment of this application, the pilot symbols are generated based on the target polynomial and the seed. The target polynomial is any item in the foregoing Table X-1, and the target polynomial and the corresponding seed can meet that a combination of the generated $N_{PS}$ pilot symbols and $N_{TS}$ training symbols achieves direct current balance, that is, in one polarization direction, a sum of real parts of complex numbers corresponding to the training symbols and the pilot symbols in one sub-frame is 0, and a sum of imaginary parts thereof is also 0, which helps a receiver end restore a signal better, and improves quality of the signal at the receiver end.

A structure of the super-frame provided in this embodiment of this application can be understood by referring to the corresponding content in (a) in FIG. 6 to (c) in FIG. 6, and details are not described herein again.

The solution provided in this embodiment of this application is applicable to a row indexed 18 and a row indexed 9 in Table 2 in the foregoing embodiment.

The two super-frame formats are separately described below.

For the row indexed 18 in the foregoing Table 2, in one polarization direction, a quantity of symbols before framing is 172032, and the following Table X-2 lists parameters $N_{SF}$, $N_{PS}$, $N_{TS}$, $N_S$, $N_F$, $N_{FAW}$, $N_{RES}$, and OH corresponding to the super-frame, and the like.

Table X-2

| $N_{SF}$ | $N_{PS}$ | $N_S$ | $N_F$ | OH | $N_{TS}$ | $N_{FAW} + N_{RES}$ |
|---|---|---|---|---|---|---|
| 24 | 114 | 7296 | 175104 | 1.79% | 11 | 96 |

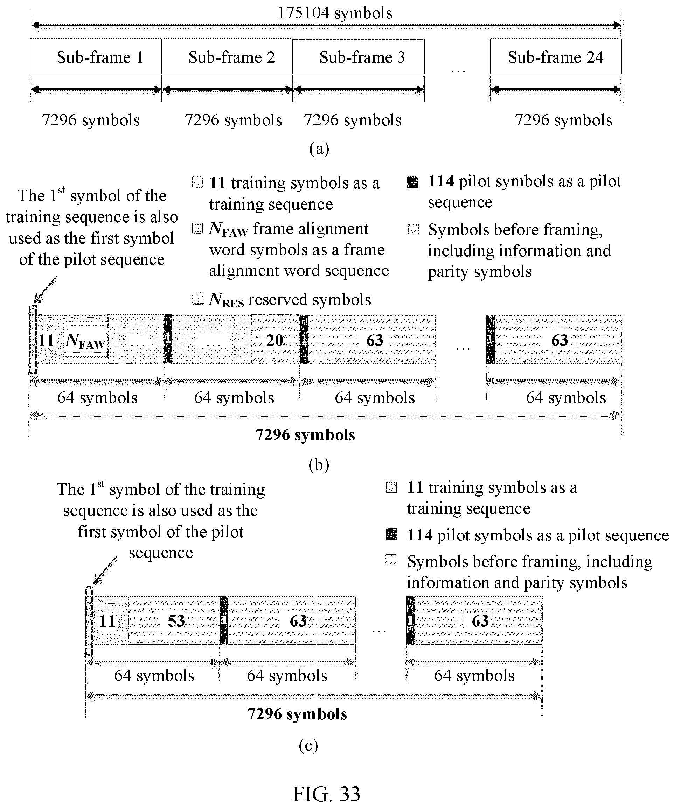

A super-frame structure thereof is shown in (a) in FIG. 33. The super-frame includes 24 sub-frames, and each sub-frame includes 7296 symbols. The 1st sub-frame is shown in (b) in FIG. 33, including 11 training symbols, $N_{FAW}$ frame alignment word symbols, and $N_{RES}$ reserved symbols, and $N_{FAW} + N_{RES} = 96$. As shown in (c) in FIG. 33, the 2nd to 24th sub-frames each also have 11 training symbols. In addition, in each sub-frame, the 1st symbol in every 64 symbols is a pilot symbol, and each sub-frame includes 114 pilot symbols.

In (b) in FIG. 33, $N_{FAW} = 22$ and $N_{RES} = 74$ are used as an example for description. A sequence of 22 frame alignment word symbols can be understood by referring to the following Table X-3:

Table X-3

| Polarization | Sequence of frame alignment word symbols |
|---|---|
| Polarization 1 | A - Aj, A + Aj, A + Aj, A + Aj, A - Aj, A - Aj, -A - Aj, A + Aj, -A - Aj, -A + Aj, -A + Aj, A - Aj, - A - Aj, -A - Aj, -A + Aj, A + Aj, -A - Aj, A - Aj, -A + Aj, A + Aj, -A - Aj, -A + Aj |
| Polarization 2 | A + Aj, -A + Aj, -A - Aj, -A + Aj, A - Aj, A + Aj, A - Aj, A - Aj, -A - Aj, A - Aj, A + Aj, -A + Aj, -A + Aj, A + Aj, -A - Aj, A + Aj, -A - Aj, -A + Aj, A - Aj, -A - Aj, A - Aj, -A + Aj |

A sequence of 11 training symbols can be understood by referring to the following Table X-4:

Table X-4

| Polarization | Sequence of training symbols |
|---|---|
| Polarization 1 | -A + Aj, A + Aj, -A + Aj, A + Aj, -A - Aj, A + Aj, -A - Aj, -A - Aj, A + Aj, A - Aj, A - Aj |
| Polarization 2 | -A - Aj, -A-Aj, A - Aj, -A + Aj, -A + Aj. A + Aj, -A-Aj, -A + Aj, A -Aj, A + Aj, A - Aj |

In this example, the 114 pilot symbols are determined based on the target polynomial and the corresponding seed (seed). In this embodiment of this application, the target polynomial is a 10-order polynomial, and the 10-order polynomial may be expressed as:

$$x^{10} + a_9 \times x^9 + a_8 \times x^8 + a_7 \times x^7 + a_6 \times x^6 + a_5 \times x^5 + a_4 \times x^4 + a_3 \times x^3 + a_2 \times x^2 + a_1 \times x + 1$$

where a value of $a_9 \dots a_1$ may be 0 or 1.

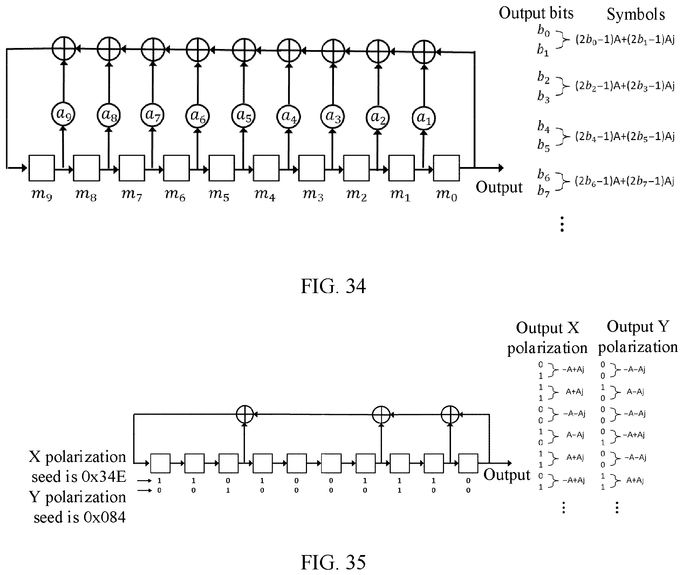

A pilot symbol generation structure can be understood by referring to FIG. 34. As shown in FIG. 34, a seed may be expressed as $m_9, m_8, m_7, m_6, m_5, m_4, m_3, m_2, m_1, m_0$ in the binary form. Certainly, the seed may also be expressed in the hexadecimal or decimal form, and when computed with the target polynomial, the seed needs to be converted into a binary form. For example, 0110111000 is expressed as 0x1B8 in the hexadecimal form, or is expressed as 440 in the decimal form.

In this embodiment of this application, the same target generator polynomial may be used for pilot symbols in two orthogonal polarization directions. However, due to different seeds (seed), correspondingly, pilot symbols output in the two polarization directions are not completely the same.

As shown in FIG. 34, for a scenario in which 114 pilot symbols need to be generated, a bit sequence with a continuous length of 228, $b_0, b_1, b_2, ... b_{227}$, is obtained based on the target polynomial and the seed. Every two consecutive bits in the bit sequence $b_0, b_1, b_2, ... b_{227}$ are mapped to one symbol, where $b_{2t}$ and $b_{2t+1}$ are mapped to one symbol $(2b_{2t} - 1)$ A + $(2b_{2t+1} - 1)$Aj, $0 \leq t < 114$. It should be noted that the symbols $(2b_{2t} - 1)$A + $(2b_{2t+1} - 1)$Aj may not be symbols in a constellation diagram of the used modulation format, and may be four symbols in a middle area between the outermost four symbols and the innermost four symbols in the constellation diagram of the used modulation format. In this case, the training symbols and the pilot symbols have fair noise and sensitivity, but have a relatively low peak-to-average power ratio. Taking 16QAM as an example, values of the 16 symbols in the 16QAM constellation diagram are $\{\pm1 \pm 1j, \pm1 \pm 3j, \pm3 \pm 1j, \pm3 \pm 3j\}$, and a value of the real number A meets $1 \leq A \leq 3$. A specific value of the real number A may be selected according to an actual application scenario, so that the peak-to-average power ratio, noise, and sensitivity of the training symbols and the pilot symbols have a good compromise. For example, the real number $A = \sqrt{5}$, and the values of the pilot symbols and the training symbols are $\{-\sqrt{5} - \sqrt{5}j, -\sqrt{5} + \sqrt{5}j, \sqrt{5} - \sqrt{5}j, \sqrt{5} + \sqrt{5}j\}$. In addition, when the 16 symbols in the 16QAM constellation diagram are subjected to power normalization and have values of $\{\pm\frac{1}{\sqrt{10}} \pm \frac{1}{\sqrt{10}}j, \pm\frac{1}{\sqrt{10}} \pm \frac{3}{\sqrt{10}}j, \pm\frac{3}{\sqrt{10}} \pm \frac{1}{\sqrt{10}}j, \pm\frac{3}{\sqrt{10}} \pm \frac{3}{\sqrt{10}}j\}$, the value of the real number A meets $\frac{1}{\sqrt{10}} \leq A \leq \frac{3}{\sqrt{10}}$.

For example, the real number $A = \frac{\sqrt{2}}{2}$, and the values of the pilot symbols and the training symbols are $\{-\frac{\sqrt{2}}{2} - \frac{\sqrt{2}}{2}j, -\frac{\sqrt{2}}{2} + \frac{\sqrt{2}}{2}j, \frac{\sqrt{2}}{2} - \frac{\sqrt{2}}{2}j, \frac{\sqrt{2}}{2} + \frac{\sqrt{2}}{2}j\}$.

In this embodiment of this application, the target polynomial and the seed may be determined by designing values of the coefficients $a_9 ... a_1$ in the polynomial, so that a symbol sequence of the generated pilot symbols in the X polarization or the Y polarization has relatively good autocorrelation characteristics, and symbol sequences in the two polarizations have relatively good cross-correlation characteristics. Particularly, a normalized amplitude of a sidelobe value of a periodic autocorrelation function of a symbol sequence in the two polarization directions is not greater than a preset value T0, and a normalized amplitude of a periodic cross-correlation function value of the symbol sequence in the two polarization directions is not greater than a preset value T1.

When the target polynomial and hexadecimal seeds in two polarization directions are one row in the following Table X-5, a normalized amplitude of a sidelobe value of a periodic autocorrelation function of pilot symbols in the same polarization direction is not greater than 0.2, and a normalized amplitude of a periodic cross-correlation function value of pilot symbols in different polarization directions is not greater than 0.2, that is, T0 = 0.2 and T1 = 0.2.

**Table X-5**

| Index | Target polynomial | Seed in the direction of polarization 1 | Seed in the direction of polarization 2 |
|---|---|---|---|
| 1 | $x^{10} + x^9 + x^8 + x^7 + x^6 + 1$ | 0x122 | 0x0E4 |
| 2 | $x^{10} + x^9 + x^8 + x^7 + x^6 + 1$ | 0x122 | 0x06C |
| 3 | $x^{10} + x^9 + x^8 + x^7 + x^6 + 1$ | 0x362 | 0x1C4 |
| 4 | $x^{10} + x^9 + x^8 + x^7 + x^6 + 1$ | 0x362 | 0x0DC |
| 5 | $x^{10} + x^9 + x^8 + x^7 + x^6 + 1$ | 0x31A | 0x0E4 |
| 6 | $x^{10} + x^9 + x^8 + x^7 + x^6 + 1$ | 0x31A | 0x06C |
| 7 | $x^{10} + x^9 + x^8 + x^7 + x^6 + 1$ | 0x046 | 0x384 |
| 8 | $x^{10} + x^9 + x^8 + x^7 + x^6 + 1$ | 0x046 | 0x3C4 |
| 9 | $x^{10} + x^9 + x^8 + x^7 + x^6 + 1$ | 0x046 | 0x2DC |
| 10 | $x^{10} + x^9 + x^8 + x^7 + x^6 + 1$ | 0x246 | 0x348 |
| 11 | $x^{10} + x^9 + x^8 + x^7 + x^6 + 1$ | 0x246 | 0x1C4 |
| 12 | $x^{10} + x^9 + x^8 + x^7 + x^6 + 1$ | 0x246 | 0x0DC |

(continued)

| Index | Target polynomial | Seed in the direction of polarization 1 | Seed in the direction of polarization 2 |
|---|---|---|---|
| 13 | $x^{10}+x^9+x^8+x^7+x^6+1$ | 0x0F6 | 0x384 |
| 14 | $x^{10}+x^9+x^8+x^7+x^6+1$ | 0x0F6 | 0x1C4 |
| 15 | $x^{10}+x^9+x^8+x^7+x^6+1$ | 0x0F6 | 0x0DC |
| 16 | $x^{10}+x^9+x^8+x^7+x^6+1$ | 0x08E | 0x0E4 |
| 17 | $x^{10}+x^9+x^8+x^7+x^6+1$ | 0x08E | 0x06C |
| 18 | $x^{10}+x^9+x^8+x^6+x^4+1$ | 0x022 | 0x080 |
| 19 | $x^{10}+x^9+x^8+x^6+x^4+1$ | 0x022 | 0x220 |
| 20 | $x^{10}+x^9+x^8+x^6+x^4+1$ | 0x022 | 0x1FC |
| 21 | $x^{10}+x^9+x^7+x^6+x^4+1$ | 0x3A2 | 0x1A4 |
| 22 | $x^{10}+x^9+x^7+x^6+x^4+1$ | 0x03A | 0x1A4 |
| 23 | $x^{10}+x^9+x^6+x^3+1$ | 0x076 | 0x07C |
| 24 | $x^{10}+x^8+x^5+x^3+1$ | 0x3CE | 0x19C |
| 25 | $x^{10}+x^8+x^6+x^5+x^3+1$ | 0x186 | 0x048 |
| 26 | $x^{10}+x^8+x^6+x^5+x^3+1$ | 0x186 | 0x034 |
| 27 | $x^{10}+x^8+x^7+x^4+x^3+1$ | 0x1A2 | 0x2A0 |
| 28 | $x^{10}+x^8+x^7+x^4+x^3+1$ | 0x1A2 | 0x330 |
| 29 | $x^{10}+x^8+x^7+x^4+x^3+1$ | 0x10A | 0x334 |
| 30 | $x^{10}+x^8+x^7+x^4+x^3+1$ | 0x10A | 0x08C |
| 31 | $x^{10}+x^8+x^7+x^4+x^3+1$ | 0x3EA | 0x350 |
| 32 | $x^{10}+x^8+x^7+x^4+x^3+1$ | 0x3EA | 0x184 |
| 33 | $x^{10}+x^8+x^7+x^4+x^3+1$ | 0x2E6 | 0x2A0 |
| 34 | $x^{10}+x^8+x^7+x^4+x^3+1$ | 0x2E6 | 0x330 |
| 35 | $x^{10}+x^6+x^5+x^4+x^3+1$ | 0x166 | 0x0CC |
| 36 | $x^{10}+x^9+x^6+x^2+1$ | 0x21E | 0x028 |
| 37 | $x^{10}+x^9+x^6+x^2+1$ | 0x21E | 0x014 |
| 38 | $x^{10}+x^7+x^6+x^2+1$ | 0x0BE | 0x1B8 |
| 39 | $x^{10}+x^7+x^5+x^2+1$ | 0x342 | 0x16C |
| 40 | $x^{10}+x^8+x^7+x^5+x^2+1$ | 0x0D6 | 0x0CC |
| 41 | $x^{10}+x^9+x^8+x^7+x^4+x^2+1$ | 0x16A | 0x0DC |
| 42 | $x^{10}+x^9+x^8+x^7+x^4+x^2+1$ | 0x2A6 | 0x0DC |
| 43 | $x^{10}+x^7+x^5+x^4+x^2+1$ | 0x18A | 0x324 |
| 44 | $x^{10}+x^7+x^5+x^4+x^2+1$ | 0x1C6 | 0x324 |
| 45 | $x^{10}+x^9+x^7+x^5+x^4+x^2+1$ | 0x26E | 0x38C |
| 46 | $x^{10}+x^9+x^7+x^5+x^4+x^2+1$ | 0x26E | 0x27C |
| 47 | $x^{10}+x^9+x^8+x^3+x^2+1$ | 0x102 | 0x1F0 |
| 48 | $x^{10}+x^9+x^8+x^3+x^2+1$ | 0x022 | 0x1AC |
| 49 | $x^{10}+x^9+x^8+x^3+x^2+1$ | 0x00A | 0x144 |
| 50 | $x^{10}+x^9+x^8+x^3+x^2+1$ | 0x14A | 0x07C |
| 51 | $x^{10}+x^9+x^8+x^3+x^2+1$ | 0x0A6 | 0x07C |

(continued)

| Index | Target polynomial | Seed in the direction of polarization 1 | Seed in the direction of polarization 2 |
|---|---|---|---|
| 52 | $x^{10}+x^9+x^8+x^3+x^2+1$ | 0x176 | 0x1AC |
| 53 | $x^{10}+x^9+x^8+x^3+x^2+1$ | 0x0BE | 0x07C |
| 54 | $x^{10}+x^9+x^8+x^7+x^3+x^2+1$ | 0x082 | 0x264 |
| 55 | $x^{10}+x^7+x^6+x^3+x^2+1$ | 0x202 | 0x170 |
| 56 | $x^{10}+x^7+x^6+x^3+x^2+1$ | 0x202 | 0x3F4 |
| 57 | $x^{10}+x^7+x^6+x^3+x^2+1$ | 0x142 | 0x2E0 |
| 58 | $x^{10}+x^7+x^6+x^3+x^2+1$ | 0x142 | 0x054 |
| 59 | $x^{10}+x^7+x^6+x^3+x^2+1$ | 0x142 | 0x07C |
| 60 | $x^{10}+x^7+x^6+x^3+x^2+1$ | 0x2EA | 0x150 |
| 61 | $x^{10}+x^7+x^6+x^3+x^2+1$ | 0x306 | 0x220 |
| 62 | $x^{10}+x^7+x^6+x^3+x^2+1$ | 0x306 | 0x094 |
| 63 | $x^{10}+x^8+x^5+x+1$ | 0x3FE | 0x0E0 |
| 64 | $x^{10}+x^8+x^4+x+1$ | 0x28E | 0x0F4 |
| 65 | $x^{10}+x^9+x^8+x^7+x^4+x+1$ | 0x102 | 0x248 |
| 66 | $x^{10}+x^8+x^5+x^4+x+1$ | 0x10A | 0x0EC |
| 67 | $x^{10}+x^5+x^3+x+1$ | 0x1C6 | 0x07C |
| 68 | $x^{10}+x^8+x^6+x^5+x^3+x+1$ | 0x246 | 0x24C |
| 69 | $x^{10}+x^9+x^8+x^7+x^4+x^3+x+1$ | 0x1C6 | 0x130 |
| 70 | $x^{10}+x^6+x^4+x^3+x+1$ | 0x25A | 0x23C |
| 71 | $x^{10}+x^6+x^4+x^3+x+1$ | 0x2F6 | 0x23C |
| 72 | $x^{10}+x^8+x^7+x^2+x+1$ | 0x022 | 0x1CC |
| 73 | $x^{10}+x^8+x^7+x^2+x+1$ | 0x022 | 0x3DC |
| 74 | $x^{10}+x^8+x^7+x^2+x+1$ | 0x226 | 0x1CC |
| 75 | $x^{10}+x^8+x^7+x^2+x+1$ | 0x226 | 0x3DC |
| 76 | $x^{10}+x^8+x^7+x^2+x+1$ | 0x316 | 0x1C4 |
| 77 | $x^{10}+x^8+x^7+x^2+x+1$ | 0x316 | 0x2EC |
| 78 | $x^{10}+x^8+x^7+x^2+x+1$ | 0x12E | 0x1C4 |
| 79 | $x^{10}+x^8+x^7+x^2+x+1$ | 0x12E | 0x2EC |
| 80 | $x^{10}+x^9+x^8+x^7+x^4+x^2+x+1$ | 0x38A | 0x07C |
| 81 | $x^{10}+x^9+x^6+x^3+x^2+x+1$ | 0x252 | 0x398 |
| 82 | $x^{10}+x^9+x^6+x^3+x^2+x+1$ | 0x13A | 0x330 |
| 83 | $x^{10}+x^9+x^6+x^3+x^2+x+1$ | 0x13A | 0x398 |
| 84 | $x^{10}+x^8+x^6+x^3+x^2+x+1$ | 0x31A | 0x310 |
| 85 | $x^{10}+x^8+x^6+x^3+x^2+x+1$ | 0x31A | 0x1C4 |
| 86 | $x^{10}+x^6+x^5+x^3+x^2+x+1$ | 0x262 | 0x3A4 |
| 87 | $x^{10}+x^6+x^5+x^3+x^2+x+1$ | 0x292 | 0x36C |
| 88 | $x^{10}+x^4+x^3+x^2+x+1$ | 0x222 | 0x048 |
| 89 | $x^{10}+x^4+x^3+x^2+x+1$ | 0x222 | 0x138 |
| 90 | $x^{10}+x^4+x^3+x^2+x+1$ | 0x322 | 0x368 |

(continued)

| Index | Target polynomial | Seed in the direction of polarization 1 | Seed in the direction of polarization 2 |
|---|---|---|---|
| 91 | $x^{10}+x^4+x^3+x^2+x+1$ | 0x322 | 0x1D8 |
| 92 | $x^{10}+x^4+x^3+x^2+x+1$ | 0x322 | 0x0E4 |
| 93 | $x^{10}+x^4+x^3+x^2+x+1$ | 0x0E2 | 0x368 |
| 94 | $x^{10}+x^4+x^3+x^2+x+1$ | 0x0E2 | 0x1D8 |
| 95 | $x^{10}+x^4+x^3+x^2+x+1$ | 0x0E2 | 0x0E4 |
| 96 | $x^{10}+x^4+x^3+x^2+x+1$ | 0x07A | 0x2C4 |
| 97 | $x^{10}+x^4+x^3+x^2+x+1$ | 0x07A | 0x3B4 |
| 98 | $x^{10}+x^4+x^3+x^2+x+1$ | 0x04E | 0x2F0 |
| 99 | $x^{10}+x^4+x^3+x^2+x+1$ | 0x04E | 0x224 |
| 100 | $x^{10}+x^4+x^3+x^2+x+1$ | 0x36E | 0x2C4 |
| 101 | $x^{10}+x^4+x^3+x^2+x+1$ | 0x36E | 0x0EC |
| 102 | $x^{10}+x^4+x^3+x^2+x+1$ | 0x21E | 0x368 |
| 103 | $x^{10}+x^4+x^3+x^2+x+1$ | 0x21E | 0x1D8 |

When the target polynomial and hexadecimal seeds in two polarization directions are one row in the following Table X-6 (Table X-6 is a subset of Table X-5), in one polarization direction, in a combination of 114 pilot symbols and 11 training symbols, quantities of -A-Aj, -A+Aj, A-Aj, and A+Aj in one polarization direction are all 31.

Table X-6

| Index | Target polynomial | Seed in the direction of polarization 1 | Seed in the direction of polarization 2 |
|---|---|---|---|
| 1 | $x^{10}+x^9+x^8+x^7+x^6+1$ | 0x046 | 0x384 |
| 2 | $x^{10}+x^9+x^8+x^7+x^6+1$ | 0x046 | 0x3C4 |
| 3 | $x^{10}+x^9+x^6+x^3+1$ | 0x076 | 0x07C |
| 4 | $x^{10}+x^8+x^7+x^4+x^3+1$ | 0x1A2 | 0x330 |
| 5 | $x^{10}+x^8+x^7+x^4+x^3+1$ | 0x2E6 | 0x330 |
| 6 | $x^{10}+x^8+x^7+x^2+x+1$ | 0x226 | 0x3DC |
| 7 | $x^{10}+x^9+x^6+x^3+x^2+x+1$ | 0x13A | 0x330 |
| 8 | $x^{10}+x^4+x^3+x^2+x+1$ | 0x322 | 0x368 |
| 9 | $x^{10}+x^4+x^3+x^2+x+1$ | 0x322 | 0x0E4 |
| 10 | $x^{10}+x^4+x^3+x^2+x+1$ | 0x0E2 | 0x368 |
| 11 | $x^{10}+x^4+x^3+x^2+x+1$ | 0x0E2 | 0x0E4 |
| 12 | $x^{10}+x^4+x^3+x^2+x+1$ | 0x04E | 0x2F0 |

Considering that a sequence generated when the target polynomial is a primitive polynomial generally has relatively good randomness, and that more non-zero terms of the target polynomial indicate more complex implementation, when the target polynomial uses the primitive polynomial and there are no more than 5 non-zero terms of the target polynomial, and when the target polynomial and hexadecimal seeds in two polarization directions are one row in the following Table X-7, a normalized amplitude of a sidelobe value of a periodic autocorrelation function of pilot symbols in the same polarization direction is not greater than 0.25, and a normalized amplitude of a periodic cross-correlation function value of pilot symbols in different polarization directions is not greater than 0.25.

Table X-7

| Index | Target polynomial | Seed in the direction of polarization 1 | Seed in the direction of polarization 2 |
|---|---|---|---|
| 1 | $x^{10}+x^9+x^7+x^3+1$ | 0x23E | 0x094 |
| 2 | $x^{10}+x^7+x^6+x^2+1$ | 0x0BE | 0x1B8 |
| 3 | $x^{10}+x^9+x^6+x+1$ | 0x002 | 0x210 |
| 4 | $x^{10}+x^9+x^6+x+1$ | 0x002 | 0x308 |
| 5 | $x^{10}+x^9+x^6+x+1$ | 0x002 | 0x184 |
| 6 | $x^{10}+x^9+x^6+x+1$ | 0x1C2 | 0x040 |
| 7 | $x^{10}+x^8+x^5+x+1$ | 0x3FE | 0x0E0 |
| 8 | $x^{10}+x^8+x^5+x+1$ | 0x3FE | 0x270 |
| 9 | $x^{10}+x^8+x^5+x+1$ | 0x3FE | 0x304 |
| 10 | $x^{10}+x^9+x^4+x+1$ | 0x3B6 | 0x1A0 |
| 11 | $x^{10}+x^9+x^4+x+1$ | 0x3B6 | 0x0D0 |
| 12 | $x^{10}+x^9+x^4+x+1$ | 0x3B6 | 0x058 |
| 13 | $x^{10}+x^9+x^4+x+1$ | 0x3B6 | 0x22C |
| 14 | $x^{10}+x^7+x^3+x+1$ | 0x34E | 0x084 |

In Table X-7, in a row indexed 14, when the target polynomial, which may also referred to as a primitive polynomial, is $x^{10}+x^7+x^3+x+1$, and the corresponding hexadecimal seeds in the two polarization directions are 0x34E and 0x084, a process of generating 114 pilot symbols can be understood by referring to FIG. 35.

As shown in FIG. 35, in the X polarization direction, the input polarization seed is 0x34E, which is 1101001110 after being converted into a binary sequence, that is, values of $m_9$ to $m_0$. If two bits 1 and 0 are output consecutively in sequence, a pilot symbol in the X polarization direction is A-Aj. If two bits 0 and 0 are output consecutively in sequence, a pilot symbol in the X polarization direction is -A-Aj. If two bits 1 and 1 are output consecutively in sequence, a pilot symbol in the X polarization direction is A+Aj. If two bits 0 and 1 are output consecutively in sequence, a pilot symbol in the X polarization direction is -A+Aj. By analogy, 114 pilot symbols in the X polarization direction may be obtained.

As shown in FIG. 35, in the Y polarization direction, the input polarization seed is 0x084, which is 0010000100 after being converted into a binary sequence, that is, values of $m_9$ to $m_0$. If two bits 1 and 0 are output consecutively in sequence, a pilot symbol in the Y polarization direction is A-Aj. If two bits 0 and 0 are output consecutively in sequence, a pilot symbol in the Y polarization direction is -A-Aj. If two bits 1 and 1 are output consecutively in sequence, a pilot symbol in the Y polarization direction is A+Aj. If two bits 0 and 1 are output consecutively in sequence, a pilot symbol in the Y polarization direction is -A+Aj. By analogy, 114 pilot symbols in the Y polarization direction may be obtained.

The polarization seed in the X polarization direction may be interchanged with the polarization seed in the Y polarization direction. Therefore, 114 pilot symbols shown in the following Table X-8 may be obtained.

Table X-8

| Polarization direction | Pilot symbol |
|---|---|
| Polarization 1 | -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, -A-Aj, -A-Aj, -A+Aj, -A-Aj, -A+Aj, -A-Aj, -A-Aj, A+Aj, A+Aj, -A-Aj, A+Aj, A+Aj, -A+Aj, A-Aj, -A+Aj, A-Aj, -A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, -A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, - A+Aj, -A+Aj, -A-Aj, -A-Aj, -A+Aj, -A+Aj, -A+Aj, A-Aj, -A+Aj, -A+Aj, A-Aj, -A+Aj, -A-Aj, A-Aj, A+Aj, - A+Aj, -A-Aj, A-Aj, -A-Aj, A+Aj, A+Aj |

(continued)

| Polarization direction | Pilot symbol |
|---|---|
| Polarization 2 | -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, -A-Aj, A-Aj, -A+Aj, -A+Aj, A-Aj, A-Aj, -A+Aj, -A-Aj, -A+Aj, A+Aj, A+Aj, -A-Aj, -A+Aj, -A+Aj, -A-Aj, A+Aj, A+Aj, A-Aj, -A+Aj, A-Aj, -A-Aj, -A-Aj, -A+Aj, A-Aj, -A+Aj, -A-Aj, -A+Aj, A-Aj, A+Aj, A-Aj, -A-Aj, A+Aj, -A+Aj, A-Aj, -A-Aj, A+Aj, A+Aj, -A+Aj, -A+Aj, -A-Aj, -A-Aj, A+Aj, -A-Aj, -A+Aj, -A+Aj, -A+Aj, A+Aj, -A+Aj, A+Aj, A+Aj, A+Aj, -A+Aj, A+Aj, -A-Aj, -A-Aj, A-Aj, - A+Aj, -A+Aj, A+Aj, A-Aj, A+Aj, -A+Aj, A+Aj, A-Aj, A-Aj, A+Aj, -A-Aj, A+Aj, A+Aj, A-Aj, A+Aj, A+Aj, - A-Aj, A+Aj, -A+Aj, -A-Aj, A-Aj, A-Aj, A-Aj, A+Aj, -A+Aj, -A-Aj, -A-Aj, -A+Aj, A+Aj, -A-Aj, A-Aj, A-Aj, -A+Aj, -A-Aj, A-Aj, A-Aj, -A+Aj |

In the foregoing Table X-8, in one polarization direction, in a combination of 114 pilot symbols and 11 training symbols, quantities of -A-Aj, -A+Aj, A-Aj, and A+Aj in the one polarization direction are all 31.

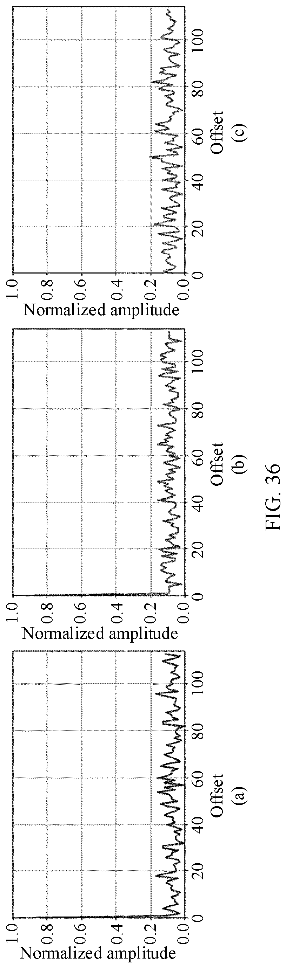

In the solution of the foregoing Table X-8, correlation characteristics corresponding to the pilot symbols are shown in FIG. 36. (a) in FIG. 36 shows a periodic autocorrelation result of the sequence of pilot symbols in the X polarization direction, (b) in FIG. 36 shows a periodic autocorrelation result of the sequence of pilot symbols in the Y polarization direction, and (c) in FIG. 36 shows a periodic cross-correlation result of the sequence of pilot symbols in the X and Y polarization directions. A normalized amplitude of a sidelobe value of a periodic autocorrelation function of a symbol sequence in the two polarization directions is not greater than 0.167, and a normalized amplitude of a sidelobe value of a periodic cross-correlation function of the symbol sequence in the two polarization directions is not greater than 0.202. A frame overhead of the super-frame structure provided in this embodiment of this application is also as low as 1.79%, and the sequence of pilot symbols has relatively good autocorrelation and cross-correlation characteristics. The training symbols and the pilot symbols can also be combined together to meet direct current balance, which helps the receiver end restore a signal, and improves quality of the restored signal.

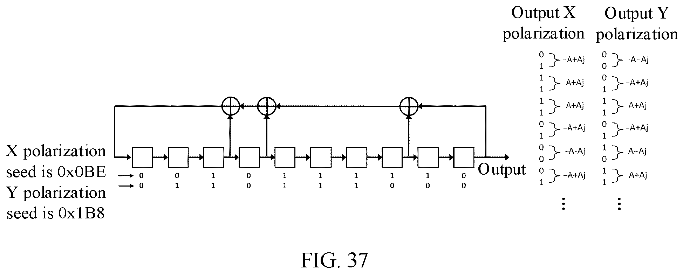

Another example of the foregoing super-frame structure is further provided below. When the target polynomial is $x^{10}+ x^7+ x^6+ x^2+ 1$, and the corresponding hexadecimal seeds in the two polarization directions are 0x0BE and Ox1B8, a process of generating pilot symbols in the two polarization directions can be understood by referring to FIG. 37.

As shown in FIG. 37, in the X polarization direction, the input polarization seed is 0x0BE, which is 0010111110 after being converted into a binary sequence, that is, values of $m_9$ to $m_0$. If two bits 1 and 0 are output consecutively in sequence, a pilot symbol in the X polarization direction is A-Aj. If two bits 0 and 0 are output consecutively in sequence, a pilot symbol in the X polarization direction is -A-Aj. If two bits 1 and 1 are output consecutively in sequence, a pilot symbol in the X polarization direction is A+Aj. If two bits 0 and 1 are output consecutively in sequence, a pilot symbol in the X polarization direction is -A+Aj. By analogy, 114 pilot symbols in the X polarization direction may be obtained.

As shown in FIG. 37, in the Y polarization direction, the input polarization seed is 0x1B8, which is 0110111000 after being converted into a binary sequence, that is, values of $m_9$ to $m_0$. If two bits 1 and 0 are output consecutively in sequence, a pilot symbol in the Y polarization direction is A-Aj. If two bits 0 and 0 are output consecutively in sequence, a pilot symbol in the Y polarization direction is -A-Aj. If two bits 1 and 1 are output consecutively in sequence, a pilot symbol in the Y polarization direction is A+Aj. If two bits 0 and 1 are output consecutively in sequence, a pilot symbol in the Y polarization direction is -A+Aj. By analogy, 114 pilot symbols in the Y polarization direction may be obtained.

The polarization seed in the X polarization direction may be interchanged with the polarization seed in the Y polarization direction. Therefore, 114 pilot symbols shown in the following Table X-9 may be obtained.

**Table X-9**

| Polarization direction | Pilot symbol |
|---|---|
| Polarization 1 | -A+Aj, A+Aj, A+Aj, -A+Aj, -A-Aj, -A+Aj, -A-Aj, -A+Aj, -A+Aj, A-Aj, A+Aj, A-Aj, -A-Aj, -A+Aj, -A+Aj, A-Aj, -A-Aj, A+Aj, -A+Aj, A-Aj, -A-Aj, -A+Aj, A-Aj, -A+Aj, -A-Aj, A-Aj, A-Aj, -A-Aj, A+Aj, A+Aj, -A-Aj, A+Aj, A-Aj, -A-Aj, -A+Aj, A+Aj, A+Aj, A-Aj, -A+Aj, -A-Aj, A+Aj, -A-Aj, A-Aj, -A-Aj, -A+Aj, A+Aj, - A-Aj, A+Aj, -A-Aj, A+Aj, A-Aj, A+Aj, -A-Aj, A-Aj, -A-Aj, A+Aj, A-Aj, A-Aj, -A+Aj, -A+Aj, A-Aj, A-Aj, - A-Aj, A-Aj, A-Aj, A+Aj, -A+Aj, A+Aj, A-Aj. -A+Aj, -A-Aj, -A+Aj, -A+Aj, -A-Aj, A-Aj, -A-Aj, A-Aj, -A-Aj, -A-Aj, A-Aj, A+Aj, -A+Aj, -A+Aj, -A+Aj, A-Aj, -A-Aj, A-Aj, -A+Aj, -A+Aj, -A+Aj, -A+Aj, -A-Aj, A+Aj, -A+Aj, -A+Aj, A-Aj, -A-Aj, -A-Aj, A+Aj, A-Aj, A+Aj, A-Aj, A+Aj, A-Aj, -A+Aj, A+Aj, A+Aj, - A+Aj, A-Aj, -A-Aj, A-Aj, A+Aj, -A-Aj, A+Aj |

(continued)

| Polarization direction | Pilot symbol |
|---|---|
| Polarization 2 | -A-Aj, -A+Aj, A+Aj, -A+Aj, A-Aj, A+Aj, -A+Aj, A+Aj, -A+Aj, -A-Aj, -A+Aj, A-Aj, -A-Aj, A+Aj, -A-Aj, A-Aj, A+Aj, -A-Aj, A-Aj, A+Aj, A-Aj, A+Aj, -A+Aj, -A-Aj, A-Aj, -A-Aj, -A-Aj, -A+Aj, A-Aj, -A-Aj, A-Aj, -A-Aj, -A+Aj, A-Aj, -A-Aj, -A-Aj, -A+Aj, A+Aj, -A-Aj, -A+Aj, -A+Aj, -A+Aj, -A-Aj, A-Aj, -A+Aj, A-Aj, A+Aj, -A+Aj, A-Aj, -A+Aj, A+Aj, -A-Aj, A-Aj, A-Aj, -A+Aj, -A+Aj, -A+Aj, A+Aj, -A+Aj, -A+Aj, A+Aj, - A-Aj, A+Aj, -A+Aj, A+Aj, -A+Aj, A-Aj, -A-Aj, -A-Aj, A-Aj, A-Aj, -A+Aj, A-Aj, -A-Aj, A-Aj, A-Aj, -A-Aj, - A-Aj, A-Aj, -A+Aj, -A-Aj, A+Aj, A+Aj, A+Aj, -A+Aj, A-Aj, A-Aj, A+Aj, -A+Aj, A-Aj, A-Aj, A-Aj, -A+Aj, - A+Aj, A+Aj, A-Aj, A+Aj, A+Aj, A-Aj, -A+Aj, A+Aj, A-Aj, -A+Aj, -A+Aj, -A+Aj, A-Aj, -A+Aj, A-Aj, A-Aj, -A-Aj, -A+Aj, A+Aj, A-Aj, A-Aj |

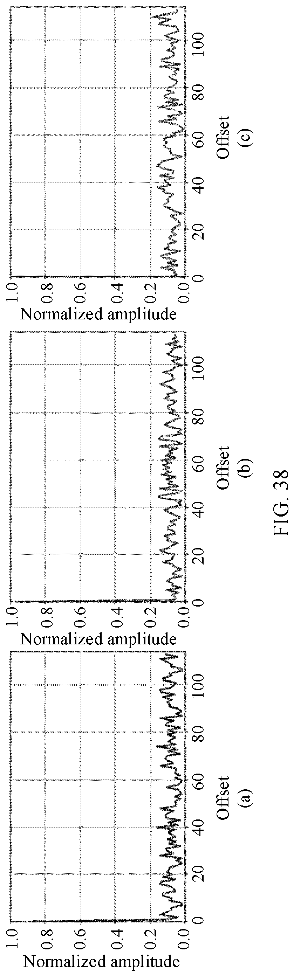

In the foregoing Table. X-9, correlation characteristics corresponding to the pilot symbols are shown in FIG. 38. (a) in FIG. 38 shows a periodic autocorrelation result of the sequence of pilot symbols in the X polarization direction, (b) in FIG. 38 shows a periodic autocorrelation result of the sequence of pilot symbols in the Y polarization direction, and (c) in FIG. 38 shows a periodic cross-correlation result of the sequence of pilot symbols in the X and Y polarization directions. A normalized amplitude of a sidelobe value of a periodic autocorrelation function of a symbol sequence in the two polarization directions is not greater than 0.162, and a normalized amplitude of a sidelobe value of a periodic cross-correlation function of the symbol sequence in the two polarization directions is not greater than 0.185. A frame overhead of the super-frame structure provided in this embodiment of this application is also as low as 1.79%, and the designed sequence of pilot symbols has relatively good autocorrelation and cross-correlation characteristics. The training sequence and the sequence of pilot symbols can also be combined together to meet direct current balance, which helps the receiver end restore a signal, and improves quality of the restored signal.

The super-frame structure corresponding to the row indexed 18 in the foregoing Table 2 and the content of the process of generating pilot symbols thereof. The corresponding content of the super-frame corresponding to the row indexed 9 in the foregoing Table 2 is described below.

For the row indexed 9 in the foregoing Table 2, a quantity of symbols before framing is 172032, and the following Table X-10 lists parameters $N_{SF}$, $N_{PS}$, $N_{TS}$, $N_S$, $N_F$, $N_{FAW}$, $N_{RES}$, and OH corresponding to the super-frame, and the like.

**Table X-10**

| $N_{SF}$ | $N_{PS}$ | $N_S$ | $N_F$ | OH | $N_{TS}$ | $N_{FAW} + N_{RES}$ |
|---|---|---|---|---|---|---|
| 48 | 57 | 3648 | 175104 | 1.79% | 6 | 96 |

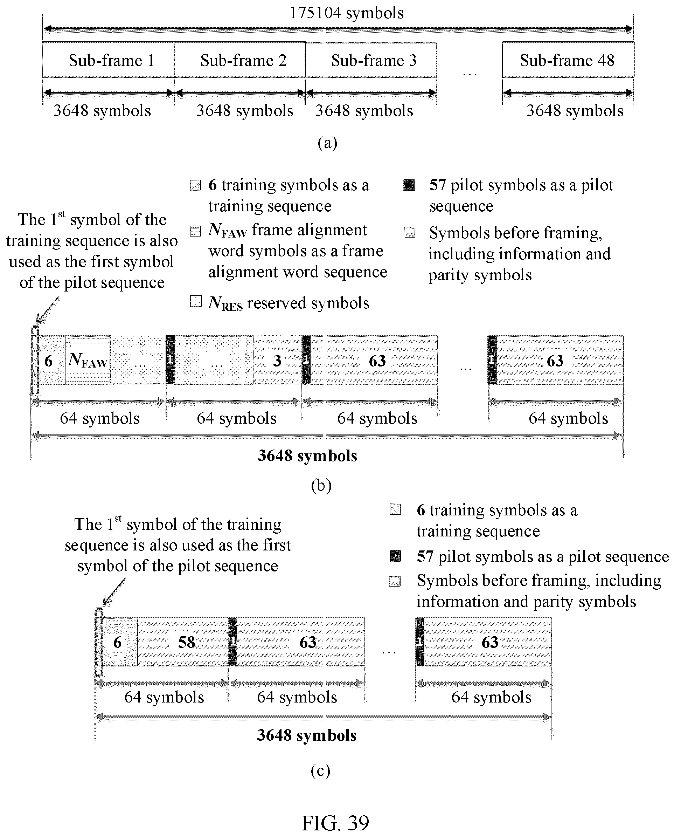

A super-frame structure thereof is shown in (a) in FIG. 39. The super-frame includes 48 sub-frames, and each sub-frame includes 3648 symbols. The 1st sub-frame is shown in (b) in FIG. 39, including 6 training symbols, $N_{FAW}$ frame alignment word symbols, and $N_{RES}$ reserved symbols, and $N_{FAW} + N_{RES} = 96$. As shown in (c) in FIG. 39, the 2nd to 48th sub-frames each also have 6 training symbols. In addition, in each sub-frame, the 1st symbol in every 64 symbols is a pilot symbol, and each sub-frame includes 57 pilot symbols.

In (b) in FIG. 39, $N_{FAW} = 22$ and $N_{RES} = 74$ are used as an example for description. A sequence of 22 frame alignment word symbols can be understood by referring to the Table X-3. It is considered that a start symbol of the 6 training symbols needs to be the same as a start symbol of the 57 pilot symbols. In (b) in FIG. 39, a sequence of 6 training symbols can be understood by referring to the following Table X-11:

**Table X-11**

| Polarization | Sequence of training symbols |
|---|---|
| Polarization 1 | A-Aj, A+Aj, A+Aj, -A-Aj, -A-Aj, -A+Aj |
| Polarization 2 | A-Aj, -A-Aj, -A+Aj, A-Aj, A+Aj, -A+Aj |

In this example, the 57 pilot symbols are determined based on the target polynomial and the corresponding seed (seed). In this embodiment of this application, the structure for generating the pilot symbols based on the target polynomial and the seed can be understood by referring to the corresponding content in FIG. 34.

For a scenario in which 57 pilot symbols need to be generated, a bit sequence with a continuous length of 114, $b_0$, $b_1, b_2, ... b_{113}$, is obtained based on the target polynomial and the seed. Every two consecutive bits in the bit sequence $b_0$,

$b_1, b_2, ... b_{113}$ are mapped to one symbol, where $b_{2t}$ and $b_{2t+1}$ are mapped to one symbol $(2b_{2t} - 1)A + (2b_{2t+1} - 1)Aj$. It should be noted that the symbols $(2b_{2t} - 1)A + (2b_{2t+1} - 1)Aj$ may not be symbols in a constellation diagram of the used modulation format, and may be four symbols in a middle area between the outermost four symbols and the innermost four symbols in the constellation diagram of the used modulation format. In this case, the training symbols and the pilot symbols have fair noise and sensitivity, but have a relatively low peak-to-average power ratio. Taking 16QAM as an example, values of the 16 symbols in the 16QAM constellation diagram are $\{\pm1 \pm 1j, \pm1 \pm 3j, \pm3 \pm 1j, \pm3 \pm 3j\}$, and a value of the real number A meets $1 \leq A \leq 3$. A specific value of the real number A may be selected according to an actual application scenario, so that the peak-to-average power ratio, noise, and sensitivity of the training symbols and the pilot symbols have a good compromise. For example, the real number $A = \sqrt{5}$, and the values of the pilot symbols and the training symbols are $\{-\sqrt{5} - \sqrt{5}j, \; -\sqrt{5} + \sqrt{5}j, \; \sqrt{5} - \sqrt{5}j, \; \sqrt{5} + \sqrt{5}j\}$. In addition, when the 16 symbols in the 16QAM constellation diagram are subjected to power normalization and have values of $\{\pm\frac{1}{\sqrt{10}} \pm \frac{1}{\sqrt{10}}j, \; \pm\frac{1}{\sqrt{10}} \pm \frac{3}{\sqrt{10}}j, \; \pm\frac{3}{\sqrt{10}} \pm \frac{1}{\sqrt{10}}j, \; \pm\frac{3}{\sqrt{10}} \pm \frac{3}{\sqrt{10}}j\}$, the value of the real number A meets $\frac{1}{\sqrt{10}} \leq A \leq \frac{3}{\sqrt{10}}$. For example, the real number $A = \frac{\sqrt{2}}{2}$, and the values of the pilot symbols and the training symbols are $\{-\frac{\sqrt{2}}{2} - \frac{\sqrt{2}}{2}j, \; -\frac{\sqrt{2}}{2} + \frac{\sqrt{2}}{2}j, \; \frac{\sqrt{2}}{2} - \frac{\sqrt{2}}{2}j, \; \frac{\sqrt{2}}{2} + \frac{\sqrt{2}}{2}j\}$

When the target polynomial and hexadecimal seeds in two polarization directions are one row in the following Table X-12, a normalized amplitude of a sidelobe value of a periodic autocorrelation function of pilot symbols in the same polarization direction is not greater than 0.23, and a normalized amplitude of a periodic cross-correlation function value of pilot symbols in different polarization directions is not greater than 0.23.

**Table X-12**

| Index | Target polynomial | Seed in one polarization direction | Seed in the other polarization direction |
|---|---|---|---|
| 1 | $x^{10} + x^7 + x^3 + x + 1$ | 0x204 | 0x279 |
| 2 | $x^{10} + x^7 + x^3 + x + 1$ | 0x0B1 | 0x3E9 |
| 3 | $x^{10} + x^7 + x^3 + x + 1$ | 0x0B1 | 0x279 |

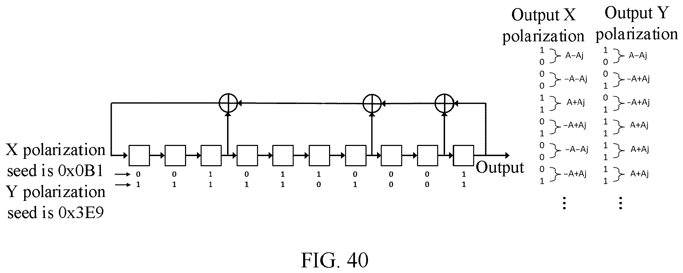

When the target polynomial is $x^{10} + x^7 + x^3 + x + 1$, and the corresponding hexadecimal seeds in the two polarization directions are 0x0B1 and 0x3E9, that is, the row indexed 2 in the foregoing Table X-12, a process of generating 57 pilot symbols can be understood by referring to FIG. 40.

As shown in FIG. 40, in the X polarization direction, the input polarization seed is 0x0B1, which is 0010110001 after being converted into a binary sequence, that is, values of $m_9$ to $m_0$. If two bits 1 and 0 are output consecutively in sequence, a pilot symbol in the X polarization direction is A-Aj. If two bits 0 and 0 are output consecutively in sequence, a pilot symbol in the X polarization direction is -A-Aj. If two bits 1 and 1 are output consecutively in sequence, a pilot symbol in the X polarization direction is A+Aj. If two bits 0 and 1 are output consecutively in sequence, a pilot symbol in the X polarization direction is -A+Aj. By analogy, 57 pilot symbols in the X polarization direction may be obtained.

As shown in FIG. 40, in the Y polarization direction, the input polarization seed is 0x3E9, which is 1111101001 after being converted into a binary sequence, that is, values of $m_9$ to $m_0$. If two bits 1 and 0 are output consecutively in sequence, a pilot symbol in the Y polarization direction is A-Aj. If two bits 0 and 0 are output consecutively in sequence, a pilot symbol in the Y polarization direction is -A-Aj. If two bits 1 and 1 are output consecutively in sequence, a pilot symbol in the Y polarization direction is A+Aj. If two bits 0 and 1 are output consecutively in sequence, a pilot symbol in the Y polarization direction is -A+Aj. By analogy, 57 pilot symbols in the Y polarization direction may be obtained.

The polarization seed in the X polarization direction may be interchanged with the polarization seed in the Y polarization direction. Therefore, 57 pilot symbols shown in the following Table X-13 may be obtained.

**Table X-13**

| Polarization direction | Pilot symbol |
|---|---|
| Polarization 1 | A-Aj, -A-Aj, A+Aj, -A+Aj, -A-Aj, -A+Aj, A+Aj, -A-Aj, -A+Aj, A+Aj, A+Aj, A-Aj, -A-Aj, -A+Aj, A+Aj, A+Aj, -A+Aj, -A+Aj, A+Aj, -A+Aj, -A+Aj, A-Aj, A+Aj, A-Aj, A+Aj, A-Aj, A+Aj, -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, -A-Aj, A-Aj, -A+Aj, -A+Aj, A-Aj, A-Aj, -A+Aj, -A-Aj, -A+Aj |

(continued)

| Polarization direction | Pilot symbol |
|---|---|
| Polarization 2 | A-Aj, -A+Aj, -A+Aj, A+Aj, A+Aj, A+Aj, A+Aj, A-Aj, -A-Aj, A+Aj, A-Aj, A+Aj, A-Aj, -A+Aj, -A+Aj, A-Aj, A+Aj, -A+Aj, A-Aj, -A-Aj, -A+Aj, A-Aj, -A+Aj, A-Aj, -A-Aj, A-Aj, -A-Aj, A-Aj, A-Aj, -A-Aj, A+Aj, -A+Aj, -A+Aj, -A+Aj, -A+Aj, -A+Aj, A+Aj, A-Aj, A-Aj, -A+Aj, -A+Aj, A+Aj, -A-Aj, A-Aj, -A+Aj, -A-Aj, A-Aj, -A-Aj, -A-Aj, A-Aj, -A-Aj, A-Aj, -A-Aj, -A+Aj, A+Aj, A-Aj, -A+Aj |

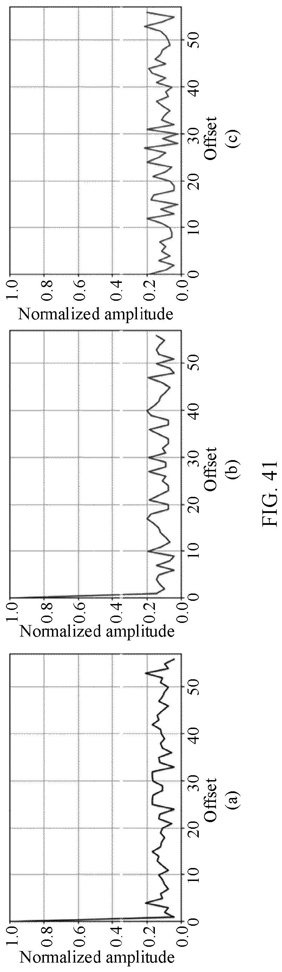

In the foregoing Table. X-13, correlation characteristics corresponding to the pilot symbols are shown in FIG. 41. (a) in FIG. 41 shows a periodic autocorrelation result of the sequence of pilot symbols in the X polarization direction, (b) in FIG. 41 shows a periodic autocorrelation result of the sequence of pilot symbols in the Y polarization direction, and (c) in FIG. 41 shows a periodic cross-correlation result of the sequence of pilot symbols in the X and Y polarization directions. A normalized amplitude of a sidelobe value of a periodic autocorrelation function of a symbol sequence in the two polarization directions is not greater than 0.206, and a normalized amplitude of a sidelobe value of a periodic cross-correlation function of the symbol sequence in the two polarization directions is not greater than 0.212. A frame overhead of the super-frame structure provided in this embodiment of this application is also as low as 1.79%, and the designed sequence of pilot symbols has relatively good autocorrelation and cross-correlation characteristics. The training sequence and the sequence of pilot symbols can also be combined together to meet direct current balance, which helps the receiver end restore a signal, and improves quality of the restored signal.

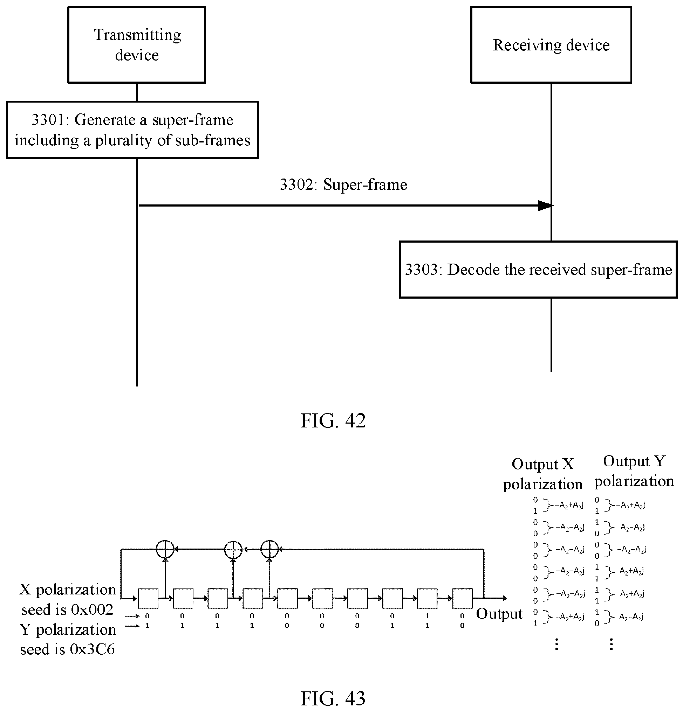

With reference to the communication system described in the foregoing embodiment corresponding to FIG. 1 and the framing process described in the embodiment corresponding to FIG. 2 or FIG. 3, an embodiment of this application further provides another transmission method for optical communication. As shown in FIG. 42, the transmission method includes the following steps.

3301: A transmitting device generates a super-frame including a plurality of sub-frames, where the sub-frame includes training symbols and pilot symbols.

In each sub-frame, in one polarization direction, there are $N_{PS}$ pilot symbols, a value of which is one of $-A_2-A_2j$, $-A_2+A_2j$, $A_2-A_2j$, and $A_2+A_2j$, where $A_2$ is a real number, and $N_{PS}$ is an even number. The $N_{PS}$ pilot symbols achieve direct current balance, and a combination of the training symbols and the $N_{PS}$ pilot symbols achieves direct current balance.

The pilot symbols are generated based on a target polynomial and a seed. The target polynomial is a primitive polynomial, and there are no more than 5 non-zero terms of the target polynomial. The target polynomial is one item in the following Table Y-1.

**Table Y-1**

| Index | Target polynomial |
|---|---|
| 1 | $x^{10}+x^9+x^7+x^6+1$ |
| 2 | $x^{10}+x^9+x^7+x^3+1$ |
| 3 | $x^{10}+x^8+x^4+x^3+1$ |
| 4 | $x^{10}+x^7+x^6+x^2+1$ |
| 5 | $x^{10}+x^9+x^6+x+1$ |
| 6 | $x^{10}+x^9+x^4+x+1$ |
| 7 | $X^{10}+X^7+X^3+X+1$ |
| 8 | $X^{10}+X^4+X^3+X+1$ |

3302: The transmitting device transmits the super-frame, and correspondingly, a receiving device receives the super-frame including the plurality of sub-frames.

3303: The receiving device decodes the received super-frame.

In the solution of this embodiment of this application, the pilot symbols are generated based on the target polynomial and the seed. The target polynomial is any item in the foregoing Table Y-1, and the target polynomial and the corresponding seed can meet that the generated $N_{PS}$ pilot symbols achieve direct current balance, and that a combination of the training symbols and the $N_{PS}$ pilot symbols achieves direct current balance, which helps a receiver end restore a signal better, and improves quality of the signal at the receiver end.

A structure of the super-frame provided in this embodiment of this application can be understood by referring to the corresponding content in (a) in FIG. 33 to (c) in FIG. 33, and details are not described herein again.

In this embodiment of this application, the following specific super-frame format is considered. A quantity of symbols before framing is 172032, and the symbols are encoded symbols. An encoding scheme may be encoding multiple times using open FEC (Open FEC, OFEC) or using Hamming codes with a code length of 128 bits, or another encoding scheme may be used. The following table lists parameters $N_{SF}$, $N_{TS}$, $N_{PS}$, $N_{FAW}$, $N_{RES}$, $N_{S}$, $N_{F}$, and OH corresponding to the super-frame, and the like.

| $N_{SF}$ | $N_{PS}$ | $N_{S}$ | $N_{F}$ | OH | $N_{TS}$ | $N_{FAW} + N_{RES}$ |
|---|---|---|---|---|---|---|
| 24 | 114 | 7296 | 175104 | 1.79% | 11 | 96 |

The super-frame includes 24 sub-frames, and each sub-frame includes 7296 symbols, as shown in (a) in FIG. 33. The 1st sub-frame is shown in (b) in FIG. 33, including 11 training symbols, $N_{FAW}$ frame alignment word symbols, and $N_{RES}$ reserved symbols, where $N_{FAW} + N_{RES} = 96$. The 2nd to 24th sub-frames each also include 11 training symbols, as shown in (c) in FIG. 33. In addition, in each sub-frame, the 1st symbol in every 64 symbols is a pilot symbol. Each sub-frame includes 114 pilot symbols.

Herein, the quantity of frame alignment word symbols $N_{FAW} = 22$ and the quantity of reserved symbols $N_{RES} = 74$ are used as an example for description, as shown in (b) in FIG. 33.

A frame alignment word sequence with a length of 22 is shown in the following Table Y-2, where a value of the real number $A_{FAW}$ is not specifically limited. The value may be selected according to an actual application scenario, so that the peak-to-average power ratio, noise, and sensitivity of the FAW symbols have a good compromise. Taking 16QAM as an example, values of the 16 symbols in the 16QAM constellation diagram are $\{\pm 1 \pm 1j, \pm 1 \pm 3j, \pm 3 \pm 1j, \pm 3 \pm 3j\}$, and a value of the real number $A_{FAW}$ meets $1 \leq A \leq 3$. For example, the real number $A = \sqrt{5}$, and the values of the pilot symbols are $\{-\sqrt{5} - \sqrt{5}j, \ -\sqrt{5} + \sqrt{5}j, \ \sqrt{5} - \sqrt{5}j, \ \sqrt{5} + \sqrt{5}j\}$.

**Table Y-2**

| Polarization | Frame alignment word sequence |
|---|---|
| Polarization 1 | $A_{FAW}-A_{FAW}j$, $A_{FAW}+A_{FAW}j$, $A_{FAW}+A_{FAW}j$, $A_{FAW}+A_{FAW}j$, $A_{FAW}-A_{FAW}j$, $A_{FAW}-A_{FAW}j$, $-A_{FAW}-A_{FAW}j$, $A_{FAW}+A_{FAW}j$, $-A_{FAW}-A_{FAW}j$, $-A_{FAW}+A_{FAW}j$, $-A_{FAW}+A_{FAW}j$, $A_{FAW}-A_{FAW}j$, $-A_{FAW}-A_{FAW}j$, $-A_{FAW}-A_{FAW}j$, $-A_{FAW}+A_{FAW}j$, $A_{FAW}+A_{FAW}j$, $-A_{FAW}-A_{FAW}j$, $A_{FAW}-A_{FAW}j$, $-A_{FAW}+A_{FAW}j$, $A_{FAW}+A_{FAW}j$, $-A_{FAW}-A_{FAW}j$, $-A_{FAW}+A_{FAW}j$ |
| Polarization 2 | $A_{FAW}+A_{FAW}j$, $-A_{FAW}+A_{FAW}j$, $-A_{FAW}-A_{FAW}j$, $-A_{FAW}+A_{FAW}j$, $A_{FAW}-A_{FAW}j$, $A_{FAW}+A_{FAW}j$, $A_{FAW}-A_{FAW}j$, $A_{FAW}-A_{FAW}j$, $-A_{FAW}-A_{FAW}j$, $A_{FAW}-A_{FAW}j$, $A_{FAW}+A_{FAW}j$, $-A_{FAW}+A_{FAW}j$, $-A_{FAW}+A_{FAW}j$, $A_{FAW}+A_{FAW}j$, $-A_{FAW}-A_{FAW}j$, $A_{FAW}+A_{FAW}j$, $-A_{FAW}-A_{FAW}j$, $-A_{FAW}+A_{FAW}j$, $A_{FAW}-A_{FAW}j$, $-A_{FAW}-A_{FAW}j$, $A_{FAW}-A_{FAW}j$, $-A_{FAW}+A_{FAW}j$ |

The 114 pilot symbols are determined based on the target polynomial and the corresponding seed (seed). In this embodiment of this application, the target polynomial is a 10-order polynomial, and the 10-order polynomial may be expressed as:

$$x^{10} + a_9 \times x^9 + a_8 \times x^8 + a_7 \times x^7 + a_6 \times x^6 + a_5 \times x^5 + a_4 \times x^4 + a_3 \times x^3 + a_2 \times x^2 + a_1 \times x + 1$$

where a value of $a_9 \dots a_1$ may be 0 or 1.

A pilot symbol generation structure can be understood by referring to the foregoing FIG. 34. As shown in FIG. 34, a seed may be expressed as $m_9, m_8, m_7, m_6, m_5, m_4, m_3, m_2, m_1, m_0$ in the binary form. Certainly, the seed may also be expressed in the hexadecimal or decimal form, and when computed with the target polynomial, the seed needs to be converted into a binary form. For example, 0110111000 is expressed as 0x1B8 in the hexadecimal form, or is expressed as 440 in the decimal form.

In this embodiment of this application, the same target generator polynomial may be used for pilot symbols in two orthogonal polarization directions. However, due to different seeds (seed), correspondingly, pilot symbols output in the two polarization directions are not completely the same.

As shown in FIG. 34, for a scenario in which 114 pilot symbols need to be generated, a bit sequence with a continuous length of 228, $b_0, b_1, b_2, \dots b_{227}$, is obtained based on the target polynomial and the seed. Every two consecutive bits in the bit sequence $b_0, b_1, b_2, \dots b_{227}$ are mapped to one symbol, where $b_{2t}$ and $b_{2t+1}$ are mapped to one

symbol $(2b_2t - 1)A_2 + (2b_{2t+1} - 1)A_2j$, $0 \leq t < 114$.

It should be understood that, when the pilot symbols are the outermost four symbols in the constellation diagram, the pilot symbols have a relatively high sensitivity (sensitivity), but have a relatively large peak-to-average power (peak to average power) ratio; and when the values of the pilot symbols are the innermost four symbols in the constellation diagram, the training symbols and the pilot symbols have relatively small noise (noise), but have a relatively low sensitivity (sensitivity).

It should be noted that the pilot symbols may not be symbols in a constellation diagram of the used modulation format, and may be four symbols in a middle area between the outermost four symbols and the innermost four symbols in the constellation diagram of the used modulation format. In this case, the pilot symbols have fair noise and sensitivity, but have a relatively low peak-to-average power ratio. Taking 16QAM as an example, values of the 16 symbols in the 16QAM constellation diagram are $\{\pm 1 \pm 1j, \pm 1 \pm 3j, \pm 3 \pm 1j, \pm 3 \pm 3j\}$, and a value of the real number $A_2$ meets $1 \leq A_2 \leq 3$. A specific value of the real number $A_2$ may be selected according to an actual application scenario, so that the peak-to-average power ratio, noise, and sensitivity of the training symbols or the pilot symbols have a good compromise. For example, the real number $A_2 = \sqrt{5}$, and the values of the pilot symbols and the training symbols are $\{-\sqrt{5} - \sqrt{5}j, \ -\sqrt{5} + \sqrt{5}j, \ \sqrt{5} - \sqrt{5}j, \ \sqrt{5} + \sqrt{5}j\}$. In addition, when the 16 symbols in the 16QAM constellation diagram are subjected to power normalization and have values of $\{\pm \frac{1}{\sqrt{10}} \pm \frac{1}{\sqrt{10}}j, \ \pm \frac{1}{\sqrt{10}} \pm \frac{3}{\sqrt{10}}j,$ $\pm \frac{3}{\sqrt{10}} \pm \frac{1}{\sqrt{10}}j, \ \pm \frac{3}{\sqrt{10}} \pm \frac{3}{\sqrt{10}}j\}$, the value of the real number $A_2$ meets $\frac{1}{\sqrt{10}} \leq A \leq \frac{3}{\sqrt{10}}$. For example, the real number $A_2 = \frac{\sqrt{2}}{2}$, and the values of the pilot symbols are $\{-\frac{\sqrt{2}}{2} - \frac{\sqrt{2}}{2}j, \ -\frac{\sqrt{2}}{2} + \frac{\sqrt{2}}{2}j, \ \frac{\sqrt{2}}{2} - \frac{\sqrt{2}}{2}j, \ \frac{\sqrt{2}}{2} + \frac{\sqrt{2}}{2}j\}$

Considering that a sequence generated when the target polynomial is a primitive polynomial generally has relatively good randomness, and that more non-zero terms of the target polynomial indicate more complex implementation, when the target polynomial uses the primitive polynomial and there are no more than 5 non-zero terms of the target polynomial, and when the target polynomial and hexadecimal seeds in two polarization directions are one row in the following Table Y-3, a normalized amplitude of a sidelobe value of a periodic autocorrelation function of pilot symbols in the same polarization direction is not greater than 0.25, and a normalized amplitude of a periodic cross-correlation function value of pilot symbols in different polarization directions is not greater than 0.25.

**Table Y-3**

| Index | Target polynomial | Seed in the direction of polarization 1 | Seed in the direction of polarization 2 |
|---|---|---|---|
| 1 | $x^{10}+x^9+x^7+x^6+1$ | Ox002 | 0x3C6 |
| 2 | $x^{10}+x^9+x^7+x^6+1$ | Ox002 | 0x38D |
| 3 | $x^{10}+x^9+x^7+x^3+1$ | 0x094 | 0x11F |
| 4 | $x^{10}+x^9+x^7+x^3+1$ | 0x129 | 0x11F |
| 5 | $x^{10}+x^8+x^4+x^3+1$ | 0x07A | Ox167 |
| 6 | $X^{10}+X^8+X^4+X^3+1$ | 0x07A | 0x2CF |
| 7 | $x^{10}+x^7+x^6+x^2+1$ | 0x1B8 | 0x22F |
| 8 | $x^{10}+x^7+x^6+x^2+1$ | 0x1B8 | 0x05F |
| 9 | $x^{10}+x^9+x^6+x+1$ | 0x040 | 0x210 |
| 10 | $x^{10}+x^9+x^6+x+1$ | 0x040 | 0x308 |
| 11 | $x^{10}+x^9+x^6+x+1$ | 0x040 | 0x184 |
| 12 | $x^{10}+x^9+x^6+x+1$ | 0x040 | 0x0C2 |
| 13 | $x^{10}+x^9+x^6+x+1$ | 0x040 | 0x0E1 |
| 14 | $x^{10}+x^9+x^6+x+1$ | 0x040 | 0x0D7 |
| 15 | $x^{10}+x^9+x^6+x+1$ | 0x040 | 0x1AF |
| 16 | $x^{10}+x^9+x^6+x+1$ | 0x210 | Ox201 |
| 17 | $x^{10}+x^9+x^6+x+1$ | 0x308 | Ox201 |
| 18 | $x^{10}+x^9+x^6+x+1$ | 0x184 | Ox201 |

(continued)

| Index | Target polynomial | Seed in the direction of polarization 1 | Seed in the direction of polarization 2 |
|---|---|---|---|
| 19 | $x^{10}+x^9+x^6+x+1$ | 0x0C2 | Ox201 |
| 20 | $x^{10}+x^9+x^6+x+1$ | 0x201 | 0x0E1 |
| 21 | $x^{10}+x^9+x^6+x+1$ | 0x201 | 0x0D7 |
| 22 | $x^{10}+x^9+x^6+x+1$ | 0x201 | 0x1AF |
| 23 | $x^{10}+x^9+x^4+x+1$ | 0x1A0 | 0x2D9 |
| 24 | $x^{10}+x^9+x^4+x+1$ | 0x1A0 | 0x3DB |
| 25 | $x^{10}+x^9+x^4+x+1$ | 0x0D0 | 0x2D9 |
| 26 | $x^{10}+x^9+x^4+x+1$ | 0x0D0 | 0x3DB |
| 27 | $x^{10}+x^9+x^4+x+1$ | 0x058 | 0x2D9 |
| 28 | $x^{10}+x^9+x^4+x+1$ | 0x058 | 0x3DB |
| 29 | $x^{10}+x^9+x^4+x+1$ | 0x22C | 0x2D9 |
| 30 | $x^{10}+x^9+x^4+x+1$ | 0x22C | 0x3DB |
| 31 | $x^{10}+x^9+x^4+x+1$ | 0x2D2 | 0x2D9 |
| 32 | $x^{10}+x^9+x^4+x+1$ | 0x2D2 | 0x3DB |
| 33 | $x^{10}+x^9+x^4+x+1$ | 0x2D9 | 0x1A5 |
| 34 | $x^{10}+x^9+x^4+x+1$ | 0x2D9 | 0x3DD |
| 35 | $x^{10}+x^9+x^4+x+1$ | 0x1A5 | 0x3DB |
| 36 | $x^{10}+x^9+x^4+x+1$ | 0x3DD | 0x3DB |
| 37 | $x^{10}+x^7+x^3+x+1$ | 0x084 | 0x1A7 |
| 38 | $x^{10}+x^7+x^3+x+1$ | 0x109 | 0x1A7 |
| 39 | $X^{10}+X^4+X^3+X+1$ | 0x365 | 0x3EB |
| 40 | $X^{10}+X^4+X^3+X+1$ | 0x2CB | 0x3EB |

In Table Y-3, in a row indexed 1, when a primitive polynomial used by the target polynomial is $x^{10}+x^9-Fx^7-Fx^6+1$, and the corresponding hexadecimal seeds in the two polarization directions are Ox002 and 0x3C6, a process of generating 114 pilot symbols can be understood by referring to FIG. 43.

As shown in FIG. 43, in the X polarization direction, the input polarization seed is 0x002, which is 0000000010 after being converted into a binary sequence, that is, values of $m_9$ to $m_0$. If two bits 1 and 0 are output consecutively in sequence, a pilot symbol in the X polarization direction is $A_2$-$A_2j$. If two bits 0 and 0 are output consecutively in sequence, a pilot symbol in the X polarization direction is -$A_2$-$A_2j$. If two bits 1 and 1 are output consecutively in sequence, a pilot symbol in the X polarization direction is $A_2$+$A_2j$. If two bits 0 and 1 are output consecutively in sequence, a pilot symbol in the X polarization direction is -$A_2$+$A_2j$. By analogy, 114 pilot symbols in the X polarization direction may be obtained.

As shown in FIG. 43, in the Y polarization direction, the input polarization seed is 0x3C6, which is 0010000100 after being converted into a binary sequence, that is, values of $m_9$ to $m_0$. If two bits 1 and 0 are output consecutively in sequence, a pilot symbol in the Y polarization direction is $A_2$-$A_2j$. If two bits 0 and 0 are output consecutively in sequence, a pilot symbol in the Y polarization direction is -$A_2$-$A_2j$. If two bits 1 and 1 are output consecutively in sequence, a pilot symbol in the Y polarization direction is $A_2$+$A_2j$. If two bits 0 and 1 are output consecutively in sequence, a pilot symbol in the Y polarization direction is -$A_2$+$A_2j$. By analogy, 114 pilot symbols in the Y polarization direction may be obtained.

The polarization seed in the X polarization direction may be interchanged with the polarization seed in the Y polarization direction. Therefore, 114 pilot symbols shown in the following Table Y-4 may be obtained.

**Table Y-4**

| Polarization direction | Pilot symbol |
|---|---|
| Polarization 1 | -A$_2$+A$_2$j, -A$_2$-A$_2$j, -A$_2$-A$_2$j, -A$_2$-A$_2$j, -A$_2$-A$_2$j, -A$_2$+A$_2$j, A$_2$+A$_2$j, -A$_2$-A$_2$j, -A$_2$+A$_2$j, A$_2$+A$_2$j, -A$_2$+A$_2$j, -A$_2$-A$_2$j, A$_2$-A$_2$j, -A$_2$-A$_2$j, -A$_2$+A$_2$j, A$_2$-A$_2$j, A$_2$+A$_2$j, A$_2$-A$_2$j, -A$_2$-A$_2$j, A$_2$-A$_2$j, A$_2$-A$_2$j, -A$_2$-A$_2$j, -A$_2$-A$_2$j, -A$_2$-A$_2$j, A$_2$+A$_2$j, - A$_2$+A$_2$j, A$_2$-A$_2$j, A$_2$+A$_2$j, -A$_2$+A$_2$j, -A$_2$-A$_2$j, A$_2$+A$_2$j, -A$_2$+A$_2$j, -A$_2$-A$_2$j, A$_2$+A$_2$j, A$_2$-A$_2$j, A$_2$-A$_2$j, A$_2$+A$_2$j, -A$_2$+A$_2$j, - A$_2$-A$_2$j, -A$_2$+A$_2$j, -A$_2$-A$_2$j, -A$_2$-A$_2$j, -A$_2$+A$_2$j, A$_2$+A$_2$j, -A$_2$+A$_2$j, A$_2$-A$_2$j, A$_2$+A$_2$j, -A$_2$-A$_2$j, A$_2$+A$_2$j, A$_2$+A$_2$j, -A$_2$-A$_2$j, A$_2$+A$_2$j, A$_2$-A$_2$j, A$_2$-A$_2$j, -A$_2$-A$_2$j, A$_2$+A$_2$j, -A$_2$-A$_2$j, A$_2$-A$_2$j, A$_2$-A$_2$j, A$_2$-A$_2$j, -A$_2$-A$_2$j, A$_2$+A$_2$j, -A$_2$+A$_2$j, -A$_2$+A$_2$j, A$_2$-A$_2$j, A$_2$+A$_2$j, A$_2$+A$_2$j, A$_2$-A$_2$j, -A$_2$+A$_2$j, A$_2$+A$_2$j, A$_2$-A$_2$j, A$_2$-A$_2$j, -A$_2$+A$_2$j, -A$_2$+A$_2$j, A$_2$+A$_2$j, A$_2$+A$_2$j, -A$_2$-A$_2$j, -A$_2$-A$_2$j, -A$_2$+A$_2$j, -A$_2$+A$_2$j, A$_2$+A$_2$j, -A$_2$-A$_2$j, -A$_2$+A$_2$j, A$_2$-A$_2$j, A$_2$-A$_2$j, -A$_2$-A$_2$j, A$_2$+A$_2$j, A$_2$+A$_2$j, -A$_2$-A$_2$j, A$_2$-A$_2$j, - A$_2$+A$_2$j, A$_2$-A$_2$j, -A$_2$+A$_2$j, -A$_2$-A$_2$j, -A$_2$+A$_2$j, A$_2$-A$_2$j, -A$_2$-A$_2$j, A$_2$-A$_2$j, -A$_2$+A$_2$j, -A$_2$+A$_2$j, A$_2$-A$_2$j, A$_2$+A$_2$j, A$_2$-A$_2$j, - A$_2$+A$_2$j, -A$_2$+A$_2$j, A$_2$-A$_2$j, -A$_2$+A$_2$j, A$_2$+A$_2$j, -A$_2$+A$_2$j, A$_2$+A$_2$j, A$_2$-A$_2$j, A$_2$-A$_2$j, A$_2$+A$_2$j |
| Polarization 2 | -A$_2$+A$_2$j, A$_2$-A$_2$j, -A$_2$-A$_2$j, A$_2$+A$_2$j, A$_2$+A$_2$j, A$_2$-A$_2$j, A$_2$+A$_2$j, -A$_2$+A$_2$j, -A$_2$-A$_2$j, -A$_2$-A$_2$j, A$_2$+A$_2$j, -A$_2$-A$_2$j, -A$_2$-A$_2$j, - A$_2$-A$_2$j, -A$_2$-A$_2$j, A$_2$-A$_2$j, -A$_2$+A$_2$j, -A$_2$-A$_2$j, A$_2$-A$_2$j, -A$_2$+A$_2$j, A$_2$+A$_2$j, -A$_2$+A$_2$j, A$_2$-A$_2$j, -A$_2$-A$_2$j, A$_2$-A$_2$j, A$_2$+A$_2$j, - A$_2$-A$_2$j, A$_2$-A$_2$j, -A$_2$+A$_2$j, A$_2$+A$_2$j, A$_2$-A$_2$j, -A$_2$-A$_2$j, -A$_2$-A$_2$j, -A$_2$+A$_2$j, -A$_2$+A$_2$j, A$_2$-A$_2$j, A$_2$+A$_2$j, -A$_2$+A$_2$j, A$_2$+A$_2$j, - A$_2$+A$_2$j, -A$_2$+A$_2$j, A$_2$+A$_2$j, -A$_2$+A$_2$j, -A$_2$-A$_2$j, A$_2$+A$_2$j, A$_2$+A$_2$j, -A$_2$+A$_2$j, -A$_2$+A$_2$j, -A$_2$-A$_2$j, -A$_2$+A$_2$j, A$_2$+A$_2$j, -A$_2$-A$_2$j, -A$_2$-A$_2$j, A$_2$-A$_2$j, -A$_2$+A$_2$j, A$_2$-A$_2$j, A$_2$+A$_2$j, -A$_2$+A$_2$j, -A$_2$+A$_2$j, -A$_2$-A$_2$j, -A$_2$-A$_2$j, -A$_2$-A$_2$j, A$_2$+A$_2$j, A$_2$+A$_2$j, A$_2$-A$_2$j, -A$_2$+A$_2$j, -A$_2$+A$_2$j, A$_2$+A$_2$j, A$_2$-A$_2$j, A$_2$+A$_2$j, -A$_2$+A$_2$j, -A$_2$-A$_2$j, -A$_2$-A$_2$j, A$_2$-A$_2$j, A$_2$-A$_2$j, -A$_2$+A$_2$j, A$_2$+A$_2$j, -A$_2$-A$_2$j, A$_2$-A$_2$j, -A$_2$-A$_2$j, -A$_2$+A$_2$j, A$_2$-A$_2$j, A$_2$-A$_2$j, - A$_2$+A$_2$j, -A$_2$-A$_2$j, A$_2$-A$_2$j, A$_2$+A$_2$j, A$_2$-A$_2$j, A$_2$-A$_2$j, -A$_2$+A$_2$j, -A$_2$-A$_2$j, -A$_2$+A$_2$j, -A$_2$+A$_2$j, A$_2$-A$_2$j, A$_2$-A$_2$j, A$_2$+A$_2$j, A$_2$-A$_2$j, A$_2$+A$_2$j, -A$_2$-A$_2$j, A$_2$-A$_2$j, - A$_2$+A$_2$j, -A$_2$-A$_2$j, A$_2$-A$_2$j, -A$_2$+A$_2$j, A$_2$-A$_2$j, A$_2$+A$_2$j, A$_2$-A$_2$j, A$_2$+A$_2$j, -A$_2$-A$_2$j, A$_2$-A$_2$j, A$_2$+A$_2$j |

In the foregoing Table Y-4, in one polarization direction, quantities of -A$_2$-A$_2$j, -A$_2$+A$_2$j, A$_2$-A$_2$j, and A$_2$+A$_2$j in the 114 pilot symbols are respectively 28, 29, 29, and 28 in the one polarization direction. In one polarization direction, quantities of -A$_2$-A$_2$j, -A$_2$+A$_2$j, A$_2$-A$_2$j, and A$_2$+A$_2$j in the pilot symbols included in one sub-frame are close to each other. In addition, in one polarization direction, a sum of the 114 pilot symbols in one sub-frame is 0, which can achieve direct current balance and facilitate quality of a signal restored at the receiver end.

In this embodiment of this application, the 1$^{st}$ symbol in each sub-frame is used as both a pilot symbol and a training symbol. The 1$^{st}$ symbol of the 11 training symbols considered is the same as the 1$^{st}$ symbol of the 114 pilot symbols. In one polarization direction, each sub-frame further includes 10 training symbols in addition to the 1$^{st}$ symbol. A value of each of the 10 training symbols is one of -A$_1$-A$_1$j, -A$_1$+A$_1$j, A$_1$-A$_1$j, and A$_1$+A$_1$j, where A$_1$ is a real number. A specific value of the real number A$_1$ may be selected according to an actual application scenario, so that the peak-to-average power ratio, noise, and sensitivity of the training symbols or the pilot symbols have a good compromise. A$_1$ may be not be equal to A$_2$. Taking 16QAM as an example, values of the 16 symbols in the 16QAM constellation diagram are $\{\pm 1 \pm 1j, \pm 1 \pm 3j, \pm 3 \pm$ 1j. $\pm 3 \pm 3j\}$, and a value of the real number A$_1$ meets $1 \le A_2 \le 3$. For example, the real number $A_1 = \sqrt{5}$, and values of the 10 training symbols in each sub-frame except the 1$^{st}$ symbol are $\{-\sqrt{5} - \sqrt{5}j, \ -\sqrt{5} + \sqrt{5}j, \ \sqrt{5} - \sqrt{5}j, \ \sqrt{5} + \sqrt{5}j\}$. In addition, when the 16 symbols in the 16QAM constellation diagram are subjected to power normalization and have values of $\{\pm \frac{1}{\sqrt{10}} \pm \frac{1}{\sqrt{10}}j, \ \pm \frac{1}{\sqrt{10}} \pm \frac{3}{\sqrt{10}}j, \ \pm \frac{3}{\sqrt{10}} \pm \frac{1}{\sqrt{10}}j, \ \pm \frac{3}{\sqrt{10}} \pm \frac{3}{\sqrt{10}}j\}$, the value of the real number A$_2$ meets $\frac{1}{\sqrt{10}} \le A \le \frac{3}{\sqrt{10}}$. For example, the real number $A_1 = \frac{\sqrt{2}}{2}$, and the values of the pilot symbols are $\{-\frac{\sqrt{2}}{2} - \frac{\sqrt{2}}{2}j, \ -\frac{\sqrt{2}}{2} + \frac{\sqrt{2}}{2}j, \ \frac{\sqrt{2}}{2} - \frac{\sqrt{2}}{2}j, \ \frac{\sqrt{2}}{2} + \frac{\sqrt{2}}{2}j\}$.

In (b) in FIG. 33, the training sequence with a length of 11 may be one item in Table 40 of which start symbols in the two polarizations are -A+Aj, a real number A used in the start symbol in each polarization direction is set to A$_2$, and a real number A used in the remaining 10 symbols except the start symbol is set to A$_1$. The training sequence is one item indexed 15 in Table 40, as shown in the following Table Y-5.

Table **Y-5**

| Polarization | Training sequence |
|---|---|
| Polarization 1 | -A$_2$+A$_2$j, A$_1$+A$_1$j, A$_1$+A$_1$j, -A$_1$-A$_1$j, -A$_1$+A$_1$j, A$_1$-A$_1$j, A$_1$+A$_1$j, -A$_1$-A$_1$j, A$_1$-A$_1$j, -A$_1$-A$_1$j, -A$_1$+A$_1$j |

(continued)

| Polarization | Training sequence |
|---|---|
| Polarization 2 | $-A_2+A_2j$, $-A_1+A_1j$, $A_1-A_1j$, $A_1-A_1j$, $A_1+A_1j$, $A_1-A_1j$, $-A_1+A_1j$, $-A_1-A_1j$, $-A_1+A_1j$, $A_1+A_1j$, $-A_1-A_1j$ |

With the foregoing 114 pilot symbols and 11 training symbols, in one polarization direction, a combination of the pilot symbols and the training symbols included in one sub-frame meets direct current balance.

It should be noted that, when values of the real numbers $A_1$ and $A_2$ are not equal, the 1st symbol of the 11 training symbols in the foregoing Table Y-5 is $-A_2+A_2j$, which is not equal to any one of values $-A_1-A_1j$, $-A_1+A_1j$, $A_1-A_1j$, and $A_1+A_1j$ of the following 10 training symbols. In some actual application scenarios, for ease of implementation, in one polarization direction, the 1st symbol in each sub-frame is used only as a pilot symbol and is no longer used as a training symbol. In this case, the quantity of training symbols in the sub-frame is reduced to 10, and a value of the training symbols is one of $-A_1-A_1j$, $-A_1+A_1j$, $A_1-A_1j$, and $A_1+A_1j$, which facilitates implementation of equalization (equalisation). In this case, the training sequence with a length of 10 may be one item in Table 33, and the real number A is set to $A_1$.

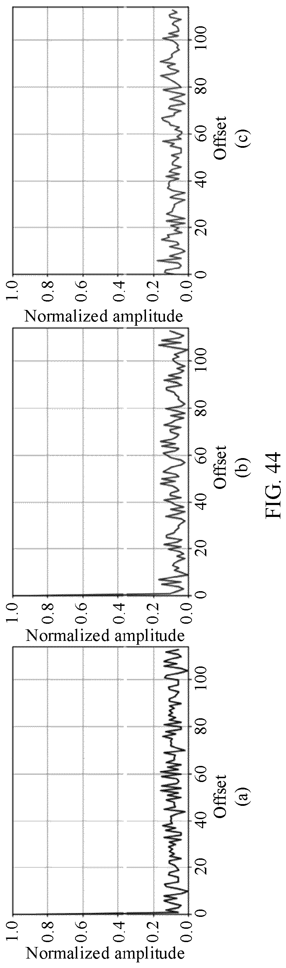

In the foregoing solution, correlation characteristics corresponding to the pilot symbols are shown in the following FIG. 44. (a) in FIG. 44 shows a periodic autocorrelation result of the sequence of pilot symbols in the X polarization direction, (b) in FIG. 44 shows a periodic autocorrelation result of the sequence of pilot symbols in the Y polarization direction, and (c) in FIG. 44 shows a periodic cross-correlation result of the sequence of pilot symbols in the X and Y polarization directions. A normalized amplitude of a sidelobe value of a periodic autocorrelation function of a symbol sequence in the two polarization directions is not greater than 0.167, and a normalized amplitude of a sidelobe value of a periodic cross-correlation function of the symbol sequence in the two polarization directions is not greater than 0.176. A frame overhead of the super-frame structure provided in this embodiment of this application is also as low as 1.79%, and the sequence of pilot symbols has relatively good autocorrelation and cross-correlation characteristics. The training symbols and the pilot symbols can also be combined together to meet direct current balance, which helps the receiver end restore a signal, and improves quality of the restored signal.

Persons skilled in the art should understand that embodiments of this application may be provided as a method or a computer program product. Therefore, this application may be in the form of a hardware-only embodiment, a software-only embodiment, or an embodiment with a combination of software and hardware. In addition, this application may be in the form of a computer program product implemented on one or more computer-usable storage media (including but not limited to a disk memory, a CD-ROM, an optical memory, and the like) that include computer-usable program code.

The foregoing descriptions are merely embodiments of the technical solutions of this application, but are not intended to limit the protection scope of this application. The skilled person will understand that the described embodiments may be implemented in various alternative forms without departing from the appended claims.

**Claims**

1. A transmission method for optical communication, comprising:

    generating (401) a super-frame comprising a plurality of sub-frames, wherein the sub-frame comprises training symbols and pilot symbols; in one polarization direction, there is one symbol that is both a training symbol and a pilot symbol, there are $N_{PS}$ pilot symbols and $N_{TS}$ training symbols, $N_{PS}$ is 114, and $N_{TS}$ is 11, wherein each of the training symbols and the pilot symbols is one of $-A-Aj$, $-A+Aj$, $A-Aj$, and $A+Aj$, A being a real number, the respective 114 pilot symbols in two polarization directions are shown in the following table:

| Polarization direction | Pilot symbol |
|---|---|
| Polarization 1 | $-A+Aj$, $A+Aj$, $-A-Aj$, $A-Aj$, $A+Aj$, $-A+Aj$, $A-Aj$, $A+Aj$, $-A-Aj$, $-A-Aj$, $A+Aj$, $-A-Aj$, $A+Aj$, $-A-Aj$, $-A+Aj$, $-A-Aj$, $-A+Aj$, $-A+Aj$, $-A-Aj$, $-A+Aj$, $A-Aj$, $A-Aj$, $A-Aj$, $A-Aj$, $A-Aj$, $A+Aj$, $A+Aj$, $-A+Aj$, $-A-Aj$, $A-Aj$, $A+Aj$, $A-Aj$, $-A+Aj$, $-A-Aj$, $A-Aj$, $-A+Aj$, $-A-Aj$, $-A-Aj$, $-A+Aj$, $-A-Aj$, $-A+Aj$, $-A-Aj$, $-A-Aj$, $A+Aj$, $A+Aj$, $-A-Aj$, $A+Aj$, $A+Aj$, $-A+Aj$, $A-Aj$, $-A+Aj$, $A-Aj$, $-A+Aj$, $A-Aj$, $A-Aj$, $A+Aj$, $-A-Aj$, $-A+Aj$, $A-Aj$, $A-Aj$, $-A-Aj$, $A+Aj$, $A-Aj$, $-A-Aj$, $A+Aj$, $A+Aj$, $A+Aj$, $-A-Aj$, $-A-Aj$, $A+Aj$, $A+Aj$, $A-Aj$, $A-Aj$, $A+Aj$, $A-Aj$, $A-Aj$, $A+Aj$, $-A+Aj$, $A+Aj$, $-A+Aj$, $A+Aj$, $-A+Aj$, $A-Aj$, $-A+Aj$, $-A-Aj$, $-A-Aj$, $A-Aj$, $-A+Aj$, $A+Aj$, $A-Aj$, $A-Aj$, $-A-Aj$, $-A+Aj$, $-A+Aj$, $-A+Aj$, $-A-Aj$, $-A-Aj$, $-A+Aj$, $-A+Aj$, $-A+Aj$, $A-Aj$, $-A+Aj$, $-A+Aj$, $A-Aj$, $-A+Aj$, $-A-Aj$, $A-Aj$, $A+Aj$, $-A+Aj$, $-A-Aj$, $A-Aj$, $-A-Aj$, $A+Aj$, $A+Aj$ |

(continued)

| Polarization direction | Pilot symbol |
|---|---|
| Polarization 2 | -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, -A-Aj, A-Aj, -A+Aj, -A+Aj, A-Aj, A-Aj, -A+Aj, -A-Aj, -A+Aj, A+Aj, A+Aj, -A-Aj, -A+Aj, -A+Aj, -A-Aj, A+Aj, A+Aj, A-Aj, -A+Aj, A-Aj, -A-Aj, -A-Aj, -A+Aj, A-Aj, -A+Aj, -A-Aj, -A+Aj, A-Aj, A+Aj, A-Aj, - A-Aj, A+Aj, -A+Aj, A-Aj, -A-Aj, A+Aj, A+Aj, -A+Aj, -A+Aj, -A-Aj, -A-Aj, A+Aj, -A-Aj, -A+Aj, -A+Aj, -A+Aj, A+Aj, -A+Aj, A+Aj, A+Aj, A+Aj, -A+Aj, A+Aj, -A-Aj, -A-Aj, A-Aj, -A+Aj, -A+Aj, A+Aj, A-Aj, A+Aj, -A+Aj, A+Aj, A-Aj, A-Aj, A+Aj, -A-Aj, A+Aj, A+Aj, A-Aj, A+Aj, A+Aj, -A-Aj, A+Aj, -A+Aj, -A-Aj, A-Aj, A-Aj, A-Aj, A+Aj, -A+Aj, - A-Aj, -A-Aj, -A+Aj, A+Aj, -A-Aj, A-Aj, A-Aj, -A+Aj, -A-Aj, A-Aj, A-Aj, -A+Aj |

transmitting (402) the super-frame.

2. The transmission method according to claim 1, wherein in one polarization direction, a total quantity $N_F$ of symbols in the super-frame is 175104, a quantity $N_{SF}$ of sub-frames is 24, a quantity $N_S$ of symbols in each sub-frame is 7296, and a quantity of symbols before framing of the super-frame is 172032.

3. The transmission method according to claim 2, wherein a sum $N_{FAW} + N_{RES}$ of a quantity $N_{FAW}$ of frame alignment word symbols and a quantity $N_{RES}$ of reserved symbols is 96.

4. The transmission method according to any one of claims 1 to 3, wherein in each sub-frame, a symbol at a fixed position in every 64 symbols is the pilot symbol, or in each sub-frame, a symbol at a fixed position in every 64 symbols is the pilot symbol.

5. The transmission method according to any one of claims 1 to 4, wherein the first symbol in each sub-frame is both a training symbol and a pilot symbol.

6. The transmission method according to any one of claims 1 to 5, wherein a modulation format of the symbols in the super-frame is 16QAM, and a value of A is $\pm 1$, $\pm 3$, or $\pm\sqrt{5}$.

7. The transmission method according to any one of claims 1 to 5, wherein a modulation format of the symbols in the super-frame is QPSK, and a value of A is $\pm 1$.

8. A reception method for optical communication, comprising:

receiving a super-frame comprising a plurality of sub-frames, wherein the sub-frame comprises training symbols and pilot symbols; in one polarization direction, there is one symbol that is both a training symbol and a pilot symbol, there are $N_{PS}$ pilot symbols and $N_{TS}$ training symbols, $N_{PS}$ is **114,** and $N_{TS}$ is **11,** wherein each of the training symbols and the pilot symbols is one of -A-Aj, -A+Aj, A-Aj, and A+Aj, A being a real number, the respective **114** pilot symbols in the two polarization directions are shown in the following table:

| Polarization direction | Pilot symbol |
|---|---|
| Polarization 1 | -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, -A-Aj, -A-Aj, - A+Aj, -A-Aj, -A+Aj, -A-Aj, -A-Aj, A+Aj, A+Aj, -A-Aj, A+Aj, A+Aj, -A+Aj, A-Aj, - A+Aj, A-Aj, -A+Aj, A-Aj, A-Aj, A+Aj, -A-Aj, -A+Aj, A-Aj, A-Aj, -A-Aj, A+Aj, A-Aj, - A-Aj, A+Aj, A+Aj, A+Aj, -A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, -A+Aj, -A+Aj, -A-Aj, -A-Aj, -A+Aj, -A+Aj, -A+Aj, A-Aj, -A+Aj, -A+Aj, A-Aj, -A+Aj, -A-Aj, A-Aj, A+Aj, -A+Aj, -A-Aj, A-Aj, -A-Aj, A+Aj, A+Aj |

(continued)

| Polarization direction | Pilot symbol |
|---|---|
| Polarization 2 | -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, -A-Aj, A-Aj, -A+Aj, -A+Aj, A-Aj, A-Aj, -A+Aj, -A-Aj, -A+Aj, A+Aj, A+Aj, -A-Aj, -A+Aj, -A+Aj, -A-Aj, A+Aj, A+Aj, A-Aj, -A+Aj, A-Aj, -A-Aj, -A-Aj, -A+Aj, A-Aj, -A+Aj, -A-Aj, -A+Aj, A-Aj, A+Aj, A-Aj, - A-Aj, A+Aj, -A+Aj, A-Aj, -A-Aj, A+Aj, A+Aj, -A+Aj, -A+Aj, -A-Aj, -A-Aj, A+Aj, -A-Aj, -A+Aj, -A+Aj, -A+Aj, A+Aj, -A+Aj, A+Aj, A+Aj, A+Aj, -A+Aj, A+Aj, -A-Aj, -A-Aj, A-Aj, -A+Aj, -A+Aj, A+Aj, A-Aj, A+Aj, -A+Aj, A+Aj, A-Aj, A-Aj, A+Aj, -A-Aj, A+Aj, A+Aj, A-Aj, A+Aj, A+Aj, -A-Aj, A+Aj, -A+Aj, -A-Aj, A-Aj, A-Aj, A-Aj, A+Aj, -A+Aj, - A-Aj, -A-Aj, -A+Aj, A+Aj, -A-Aj, A-Aj, A-Aj, -A+Aj, -A-Aj, A-Aj, A-Aj, -A+Aj |

and decoding the received super-frame.

9. The reception method according to claim 8, wherein in one polarization direction, a total quantity $N_F$ of symbols in the super-frame is 175104, a quantity $N_{SF}$ of sub-frames is 24, a quantity $N_S$ of symbols in each sub-frame is 7296, and a quantity of symbols before framing of the super-frame is 172032.

10. The reception method according to claim 9, wherein a sum $N_{FAW} + N_{RES}$ of a quantity $N_{FAW}$ of frame alignment word symbols and a quantity $N_{RES}$ of reserved symbols is 96.

11. The reception method according to any one of claims 8 to 10, wherein in each sub-frame, a symbol at a fixed position in every 64 symbols is the pilot symbol, or in each sub-frame, a symbol at a fixed position in every 64 symbols is the pilot symbol.

12. The reception method according to any one of claims 8 to 11, wherein the first symbol in each sub-frame is both a training symbol and a pilot symbol.

13. The reception method according to any one of claims 8 to 12, wherein a modulation format of the symbols in the super-frame is 16QAM, and a value of A is $\pm 1$, $\pm 3$, or $\pm\sqrt{5}$.

14. The reception method according to any one of claims 8 to 12, wherein a modulation format of the symbols in the super-frame is QPSK, and a value of A is $\pm 1$.

15. A communication device for optical communication, wherein the communication device is configured to implement the method according to any one of claims 1 to 14.

16. A system for optical communication, wherein the system comprises a transmitting device and a receiving device, wherein the transmitting device is configured to implement the method according to any one of claims 1 to 7, the receiving device is configured to implement the method according to any one of claims 8 to 14.

**Patentansprüche**

1. Sendeverfahren für optische Kommunikation, umfassend:

Erzeugen (401) eines Superframes, umfassend eine Vielzahl von Teilframes, wobei das Teilframe Trainingssymbole und Pilotsymbole umfasst; es in einer Polarisationsrichtung ein Symbol gibt, das sowohl ein Trainingssymbol als auch ein Pilotsymbol ist, es $N_{PS}$ Pilotsymbole und $N_{TS}$ Trainingssymbole gibt, $N_{PS}$ 114 ist und $N_{TS}$ 11 ist, wobei jedes der Trainingssymbole und der Pilotsymbole eines von -A-Aj, -A+Aj, A-Aj oder A+Aj ist, wobei A eine Realzahl ist, wobei die jeweiligen 114 Pilotsymbole in zwei Polarisationsrichtungen in der folgenden Tabelle gezeigt werden:

| Polarisationsrichtung | Pilotsymbol |
|---|---|
| Polarisation 1 | -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, - A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, - A+Aj, -A-Aj, -A-Aj, -A+Aj, -A-Aj, - A+Aj, -A-Aj, -A-Aj, A+Aj, A+Aj, -A-Aj, A+Aj, A+Aj, -A+Aj, A-Aj, -A+Aj, A-Aj, - A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, -A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, -A+Aj, -A+Aj, -A-Aj, -A-Aj, -A+Aj, -A+Aj, - A+Aj, A-Aj, -A+Aj, -A+Aj, A-Aj, -A+Aj, -A-Aj, A-Aj, A+Aj, -A+Aj, -A-Aj, A-Aj, -A-Aj, A+Aj, A+Aj |
| Polarisation 2 | -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, - A-Aj, A-Aj, A+Aj, -A-Aj, A-Aj, -A+Aj, - A+Aj, A-Aj, A-Aj, -A+Aj, -A-Aj, -A+Aj, A+Aj, A+Aj, -A-Aj, -A+Aj, -A+Aj, -A-Aj, A+Aj, A+Aj, A-Aj, -A+Aj, A-Aj, -A-Aj, - A-Aj, -A+Aj, A-Aj, -A+Aj, -A-Aj, -A+Aj, A-Aj, A+Aj, A-Aj, -A-Aj, A+Aj, -A+Aj, A-Aj, -A-Aj, A+Aj, A+Aj, -A+Aj, -A+Aj, -A-Aj, -A-Aj, A+Aj, -A-Aj, -A+Aj, - A+Aj, -A+Aj, A+Aj, -A+Aj, A+Aj, A+Aj, A+Aj, -A+Aj, A+Aj, -A-Aj, -A-Aj, A-Aj, -A+Aj, -A+Aj, A+Aj, A-Aj, A+Aj, -A+Aj, A+Aj, A-Aj, A-Aj, A+Aj, -A-Aj, A+Aj, A+Aj, A-Aj, A+Aj, A+Aj, -A-Aj, A+Aj, - A+Aj, -A-Aj, A-Aj, A-Aj, A-Aj, A+Aj, - A+Aj, -A-Aj, -A-Aj, -A+Aj, A+Aj, -A-Aj, A-Aj, A-Aj, -A+Aj, -A-Aj, A-Aj, A-Aj, - A+Aj |

Senden (402) des Superframes.

2. Sendeverfahren nach Anspruch 1, wobei in einer Polarisationsrichtung eine Gesamtanzahl $N_F$ an Symbolen in dem Superframe 175104 ist, eine Anzahl $N_{SF}$ an Teilframes 24 ist, eine Anzahl $N_S$ an Symbolen in jedem Teilframe 7296 ist und eine Anzahl an Symbolen vor Framen des Superframes 172032 ist.

3. Sendeverfahren nach Anspruch 2, wobei eine Summe $N_{FAW} + N_{RES}$ einer Anzahl $N_{FAW}$ an Frame-Ausrichtungswortsymbolen und einer Anzahl $N_{RES}$ an reservierten Symbolen 96 ist.

4. Sendeverfahren nach einem der Ansprüche 1 bis 3, wobei in jedem Teilframe ein Symbol an einer festen Position in jeweils 64 Symbolen das Pilotsymbol ist oder in jedem Teilframe ein Symbol an einer festen Position in jeweils 64 Symbolen das Pilotsymbol ist.

5. Sendeverfahren nach einem der Ansprüche 1 bis 4, wobei das erste Symbol in jedem Teilframe sowohl ein Trainingssymbol als auch ein Pilotsymbol ist.

6. Sendeverfahren nach einem der Ansprüche 1 bis 5, wobei ein Modulationsformat der Symbole in dem Superframe 16QAM ist und ein Wert von A $\pm 1$, $\pm 3$ oder $\pm\sqrt{5}$ ist.

7. Sendeverfahren nach einem der Ansprüche 1 bis 5, wobei ein Modulationsformat der Symbole in dem Superframe QPSK ist und ein Wert von A $\pm 1$ ist.

8. Empfangsverfahren für optische Kommunikation, umfassend:

Empfangen eines Superframes, umfassend eine Vielzahl von Teilframes, wobei das Teilframe Trainingssymbole und Pilotsymbole umfasst; es in einer Polarisationsrichtung ein Symbol gibt, das sowohl ein Trainingssymbol als auch ein Pilotsymbol ist, es $N_{PS}$ Pilotsymbole und $N_{TS}$ Trainingssymbole gibt, $N_{PS}$ 114 ist und $N_{TS}$ 11 ist, wobei jedes der Trainingssymbole und der Pilotsymbole eines von -A-Aj, -A+Aj, A-Aj oder A+Aj ist, wobei A eine Realzahl ist, wobei die jeweiligen 114 Pilotsymbole in den zwei Polarisationsrichtungen in der folgenden Tabelle gezeigt werden:

| Polarisationsrichtung | Pilotsymbol |
|---|---|
| Polarisation 1 | -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, - A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, - |

(continued)

| Polarisationsrichtung | Pilotsymbol |
|---|---|
|  | A+Aj, -A-Aj, -A-Aj, -A+Aj, -A-Aj, - A+Aj, -A-Aj, -A-Aj, A+Aj, A+Aj, -A-Aj, A+Aj, A+Aj, -A+Aj, A-Aj, -A+Aj, A-Aj, - A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, -A-Aj, -A-Aj, A+Aj, A+Aj, -A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, -A+Aj, -A+Aj, -A-Aj, -A-Aj, -A+Aj, -A+Aj, - A+Aj, A-Aj, -A+Aj, -A+Aj, A-Aj, -A+Aj, -A-Aj, A-Aj, A+Aj, -A+Aj, -A-Aj, A-Aj, -A-Aj, A+Aj, A+Aj |
| Polarisation 2 | -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, - A-Aj, A-Aj, A+Aj, -A-Aj, A-Aj, -A+Aj, - A+Aj, A-Aj, A-Aj, -A+Aj, -A-Aj, -A+Aj, A+Aj, A+Aj, -A-Aj, -A+Aj, -A+Aj, -A-Aj, A+Aj, A+Aj, A-Aj, -A+Aj, A-Aj, -A-Aj, - A-Aj, -A+Aj, A-Aj, -A+Aj, -A-Aj, -A+Aj, A-Aj, A+Aj, A-Aj, -A-Aj, A+Aj, -A+Aj, A-Aj, -A-Aj, A+Aj, A+Aj, -A+Aj, -A+Aj, -A-Aj, -A-Aj, A+Aj, -A-Aj, -A+Aj, - A+Aj, -A+Aj, A+Aj, -A+Aj, A+Aj, A+Aj, A+Aj, -A+Aj, A+Aj, -A-Aj, -A-Aj, A-Aj, -A+Aj, -A+Aj, A+Aj, A-Aj, A+Aj, -A+Aj, A+Aj, A-Aj, A-Aj, A+Aj, -A-Aj, A+Aj, A+Aj, A-Aj, A+Aj, A+Aj, -A-Aj, A+Aj, - A+Aj, -A-Aj, A-Aj, A-Aj, A-Aj, A+Aj, - A+Aj, -A-Aj, -A-Aj, -A+Aj, A+Aj, -A-Aj, A-Aj, A-Aj, -A+Aj, -A-Aj, A-Aj, A-Aj, - A+Aj |

und Decodieren des empfangenen Superframes.

9. Empfangsverfahren nach Anspruch 8, wobei in einer Polarisationsrichtung eine Gesamtanzahl $N_F$ an Symbolen in dem Superframe 175104 ist, eine Anzahl $N_{SF}$ an Teilframes 24 ist, eine Anzahl $N_S$ an Symbolen in jedem Teilframe 7296 ist und eine Anzahl an Symbolen vor Framen des Superframes 172032 ist.

10. Empfangsverfahren nach Anspruch 9, wobei eine Summe $N_{FAW}$ + $N_{RES}$ einer Anzahl $N_{FAW}$ an Frame-Ausrichtungswortsymbolen und einer Anzahl $N_{RES}$ an reservierten Symbolen 96 ist.

11. Empfangsverfahren nach einem der Ansprüche 8 bis 10, wobei in jedem Teilframe ein Symbol an einer festen Position in jeweils 64 Symbolen das Pilotsymbol ist oder in jedem Teilframe ein Symbol an einer festen Position in jeweils 64 Symbolen das Pilotsymbol ist.

12. Empfangsverfahren nach einem der Ansprüche 8 bis 11, wobei das erste Symbol in jedem Teilframe sowohl ein Trainingssymbol als auch ein Pilotsymbol ist.

13. Empfangsverfahren nach einem der Ansprüche 8 bis 12, wobei ein Modulationsformat der Symbole in dem Superframe 16QAM ist und ein Wert von A $\pm 1$, $\pm 3$ oder $\pm\sqrt{5}$ ist.

14. Empfangsverfahren nach einem der Ansprüche 8 bis 12, wobei ein Modulationsformat der Symbole in dem Superframe QPSK ist und ein Wert von A $\pm 1$ ist.

15. Kommunikationsvorrichtung für optische Kommunikation, wobei die Kommunikationsvorrichtung dazu konfiguriert ist, das Verfahren nach einem der Ansprüche 1 bis 14 umzusetzen.

16. System für optische Kommunikation, wobei das System eine Sendevorrichtung und eine Empfangsvorrichtung umfasst, wobei die Sendevorrichtung dazu konfiguriert ist, das Verfahren nach einem der Ansprüche 1 bis 7 umzusetzen, und die Empfangsvorrichtung dazu konfiguriert ist, das Verfahren nach einem der Ansprüche 8 bis 14 umzusetzen.

**Revendications**

1. Procédé de transmission pour communication optique, comprenant :

la génération (401) d'une super-trame comprenant une pluralité de sous-trames, dans lequel la sous-trame comprend des symboles d'entraînement et des symboles pilotes ; dans une direction de polarisation, il existe un symbole qui est à la fois un symbole d'entraînement et un symbole pilote, il existe $N_{PS}$ symboles pilotes et $N_{TS}$ symboles d'entraînement, $N_{PS}$ vaut 114 et $N_{TS}$ vaut 11, dans lequel chacun des symboles d'entraînement et des symboles pilotes est l'un des suivants : -A-Aj, -A+Aj, A-Aj et A+Aj, A étant un nombre réel, les 114 symboles pilotes respectifs dans deux directions de polarisation sont présentés dans le tableau suivant :

| Direction de polarisation | Symbole pilote |
|---|---|
| Polarisation 1 | -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, - A+Aj, -A-Aj, -A-Aj, -A+Aj, -A-Aj, -A+Aj, -A-Aj, -A-Aj, A+Aj, A+Aj, -A-Aj, A+Aj, A+Aj, - A+Aj, A-Aj, -A+Aj, A-Aj, -A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, -A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A+Aj, -A-Aj, -A-Aj, A-Aj, -A+Aj, A+Aj, A-Aj, A-Aj, - A-Aj, -A+Aj, -A+Aj, -A+Aj, -A-Aj, -A-Aj, - A+Aj, -A+Aj, -A+Aj, A-Aj, -A+Aj, -A+Aj, A-Aj, -A+Aj, -A-Aj, A-Aj, A+Aj, -A+Aj, -A-Aj, A-Aj, -A-Aj, A+Aj, A+Aj |
| Polarisation 2 | -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, - A-Aj, A-Aj, -A+Aj, -A+Aj, A-Aj, A-Aj, -A+Aj, - A-Aj, -A+Aj, A+Aj, A+Aj, -A-Aj, -A+Aj, -A+Aj, -A-Aj, A+Aj, A+Aj, A-Aj, -A+Aj, A-Aj, -A-Aj, - A-Aj, -A+Aj, A-Aj, -A+Aj, -A-Aj, -A+Aj, A-Aj, A+Aj, A-Aj, -A-Aj, A+Aj, -A+Aj, A-Aj, -A-Aj, A+Aj, A+Aj, -A+Aj, -A+Aj, -A-Aj, -A-Aj, A+Aj, -A-Aj, -A+Aj, -A+Aj, -A+Aj, A+Aj, -A+Aj, A+Aj, A+Aj, A+Aj, -A+Aj, A+Aj, -A-Aj, -A-Aj, A-Aj, - A+Aj, -A+Aj, A+Aj, A-Aj, A+Aj, -A+Aj, A+Aj, A-Aj, A-Aj, A+Aj, -A-Aj, A+Aj, A+Aj, A-Aj, A+Aj, A+Aj, -A-Aj, A+Aj, -A+Aj, -A-Aj, A-Aj, A-Aj, A-Aj, A+Aj, -A+Aj, -A-Aj, -A-Aj, -A+Aj, A+Aj, -A-Aj, A-Aj, A-Aj, -A+Aj, -A-Aj, A-Aj, A-Aj, - A+Aj |

la transmission (402) de la super-trame.

2. Procédé de transmission selon la revendication 1, dans lequel, dans une direction de polarisation, une quantité totale $N_F$ de symboles dans la super-trame est de 175 104, une quantité $N_{SF}$ de sous-trames est de 24, une quantité $N_S$ de symboles dans chaque sous-trame est de 7 296, et une quantité de symboles avant le tramage de la super-trame est de 172 032.

3. Procédé de transmission selon la revendication 2, dans lequel une somme $N_{FAW}$ + $N_{RES}$ d'une quantité $N_{FAW}$ de symboles de mot d'alignement de trame et d'une quantité $N_{RES}$ de symboles réservés est de 96.

4. Procédé de transmission selon l'une quelconque des revendications 1 à 3, dans lequel dans chaque sous-trame, un symbole à une position fixe tous les 64 symboles est le symbole pilote, ou dans chaque sous-trame, un symbole à une position fixe tous les 64 symboles est le symbole pilote.

5. Procédé de transmission selon l'une quelconque des revendications 1 à 4, dans lequel le premier symbole dans chaque sous-trame est à la fois un symbole d'entraînement et un symbole pilote.

6. Procédé de transmission selon l'une quelconque des revendications 1 à 5, dans lequel un format de modulation des symboles dans la super-trame est 16QAM, et une valeur de A est $\pm 1$, $\pm 3$ ou $\pm\sqrt{5}$

7. Procédé de transmission selon l'une quelconque des revendications 1 à 5, dans lequel un format de modulation des symboles dans la super-trame est QPSK et une valeur de A est $\pm 1$.

8. Procédé de réception pour communication optique, comprenant :

la réception d'une super-trame comprenant une pluralité de sous-trames, dans lequel la sous-trame comprend des symboles d'entraînement et des symboles pilotes ; dans une direction de polarisation, il existe un symbole qui est à la fois un symbole d'entraînement et un symbole pilote, il existe $N_{PS}$ symboles pilotes et $N_{TS}$ symboles d'entraînement, $N_{PS}$ vaut 114 et $N_{TS}$ vaut 11, dans lequel chacun des symboles d'entraînement et des symboles pilotes est l'un des suivants : -A-Aj, -A+Aj, A-Aj et A+Aj, A étant un nombre réel, les 114 symboles pilotes respectifs dans les deux directions de polarisation sont présentés dans le tableau suivant :

| Direction de polarisation | Symbole pilote |
|---|---|
| Polarisation 1 | -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, -A+Aj, -A-Aj, -A+Aj, A- |
| | Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, -A-Aj, -A-Aj, -A+Aj, -A-Aj, -A+Aj, -A-Aj, -A-Aj, A+Aj, A+Aj, -A-Aj, A+Aj, A+Aj, - A+Aj, A-Aj, -A+Aj, A-Aj, -A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, -A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, - A-Aj, -A+Aj, -A+Aj, -A+Aj, -A-Aj, -A-Aj, - A+Aj, -A+Aj, -A+Aj, A-Aj, -A+Aj, -A+Aj, A-Aj, -A+Aj, -A-Aj, A-Aj, A+Aj, -A+Aj, -A-Aj, A-Aj, -A-Aj, A+Aj, A+Aj |
| Polarisation 2 | -A-Aj, A-Aj, -A-Aj, -A+Aj, -A-Aj, A+Aj, A+Aj, -A+Aj, -A-Aj, -A-Aj, A-Aj, A-Aj, A-Aj, -A-Aj, -A-Aj, A-Aj, A-Aj, A+Aj, -A-Aj, A-Aj, A+Aj, - A-Aj, A-Aj, -A+Aj, -A+Aj, A-Aj, A-Aj, -A+Aj, - A-Aj, -A+Aj, A+Aj, A+Aj, -A-Aj, -A+Aj, -A+Aj, -A-Aj, A+Aj, A+Aj, A-Aj, -A+Aj, A-Aj, -A-Aj, - A-Aj, -A+Aj, A-Aj, -A+Aj, -A-Aj, -A+Aj, A-Aj, A+Aj, A-Aj, -A-Aj, A+Aj, -A+Aj, A-Aj, -A-Aj, A+Aj, A+Aj, -A+Aj, -A+Aj, -A-Aj, -A-Aj, A+Aj, -A-Aj, -A+Aj, -A+Aj, -A+Aj, A+Aj, -A+Aj, A+Aj, A+Aj, A+Aj, -A+Aj, A+Aj, -A-Aj, -A-Aj, A-Aj, - A+Aj, -A+Aj, A+Aj, A-Aj, A+Aj, -A+Aj, A+Aj, A-Aj, A- Aj, A+Aj, -A-Aj, A+Aj, A+Aj, A-Aj, A+Aj, A+Aj, -A-Aj, A+Aj, -A+Aj, -A-Aj, A-Aj, A-Aj, A-Aj, A+Aj, -A+Aj, -A-Aj, -A-Aj, -A+Aj, A+Aj, -A-Aj, A-Aj, A-Aj, -A+Aj, -A-Aj, A-Aj, A-Aj, - A+Aj |

et le décodage de la super-trame reçue.

**9.** Procédé de réception selon la revendication 8, dans lequel, dans une direction de polarisation, une quantité totale $N_F$ de symboles dans la super-trame est de 175 104, une quantité $N_{SF}$ de sous-trames est de 24, une quantité $N_S$ de symboles dans chaque sous-trame est de 7 296, et une quantité de symboles avant le tramage de la super-trame est de 172 032.

**10.** Procédé de réception selon la revendication 9, dans lequel une somme $N_{FAW} + N_{RES}$ d'une quantité $N_{FAW}$ de symboles de mot d'alignement de trame et d'une quantité $N_{RES}$ de symboles réservés est de 96.

**11.** Procédé de réception selon l'une quelconque des revendications 8 à 10, dans lequel dans chaque sous-trame, un symbole à une position fixe tous les 64 symboles est le symbole pilote, ou dans chaque sous-trame, un symbole à une position fixe tous les 64 symboles est le symbole pilote.

**12.** Procédé de réception selon l'une quelconque des revendications 8 à 11, dans lequel le premier symbole dans chaque sous-trame est à la fois un symbole d'entraînement et un symbole pilote.

**13.** Procédé de réception selon l'une quelconque des revendications 8 à 12, dans lequel un format de modulation des symboles dans la super-trame est 16QAM, et une valeur de A est $\pm 1$, $\pm 3$ ou $\pm\sqrt{5}$

**14.** Procédé de réception selon l'une quelconque des revendications 8 à 12, dans lequel un format de modulation des symboles dans la super-trame est QPSK et une valeur de A est $\pm 1$.

**15.** Dispositif de communication pour communication optique, dans lequel le dispositif de communication est configuré pour mettre en œuvre le procédé selon l'une quelconque des revendications 1 à 14.

**16.** Système pour communication optique, dans lequel le système comprend un dispositif de transmission et un dispositif de réception, dans lequel le dispositif de transmission est configuré pour mettre en œuvre le procédé selon l'une quelconque des revendications 1 à 7, le dispositif de réception est configuré pour mettre en œuvre le procédé selon l'une quelconque des revendications 8 à 14.

FIG. 1

FIG. 2

EP 4 531 356 B1

| Insert bits corresponding to frame alignment word symbols, training symbols, and reserved symbols | → | Insert bits corresponding to pilot symbols | → | Symbol mapping | → | Polarization symbol distribution | → X polarization<br><br>→ Y polarization |

FIG. 3

Generate a super-frame including a plurality of sub-frames, where in training symbols and pilot symbols included in each sub-frame, quantities of -A-Aj, -A+Aj, A-Aj, and A+Aj in one polarization direction are respectively $\lfloor(N_{TS}+N_{PS}-1)/4\rfloor$, $(N_{TS}+N_{PS}-1)/2-\lfloor(N_{TS}+N_{PS}-1)/4\rfloor$, $(N_{TS}+N_{PS}-1)/2-\lfloor(N_{TS}+N_{PS}-1)/4\rfloor$, and $\lfloor(N_{TS}+N_{PS}-1)/4\rfloor$, and quantities thereof in the other polarization direction are respectively $(N_{TS}+N_{PS}-1)/2-\lfloor(N_{TS}+N_{PS}-1)/4\rfloor$, $\lfloor(N_{TS}+N_{PS}-1)/4\rfloor$, $\lfloor(N_{TS}+N_{PS}-1)/4\rfloor$, and $(N_{TS}+N_{PS}-1)/2-\lfloor(N_{TS}+N_{PS}-1)/4\rfloor$, where $N_{TS}$ is a quantity of training symbols in each sub-frame in one polarization direction, and $N_{PS}$ is a quantity of pilot symbols in each sub-frame in one polarization direction

401

Transmit the super-frame

402

FIG. 4

FIG. 5A

FIG. 5B

$N_{SF}*N_S$ symbols

| Sub-frame 1 | Sub-frame 2 | Sub-frame 3 | ... | Sub-frame $N_{SF}$ |
|:---:|:---:|:---:|:---:|:---:|
| $N_S$ symbols | $N_S$ symbols | $N_S$ symbols | | $N_S$ symbols |

(a)

The 1$^{st}$ symbol of the training sequence is also used as the first symbol of the pilot sequence

☐ $N_{TS}$ training symbols as a training sequence

▤ $N_{FAW}$ frame alignment word symbols as a frame alignment word sequence

☐ $N_{RES}$ reserved symbols

■ $N_{PS}$ pilot symbols as a pilot sequence

▨ Symbols before framing, including information and parity symbols

$N_{TS}$ | $N_{FAW}$ | ... | 1 | ... | 1 | 63 | ... | 1 | 63

| 64 symbols | 64 symbols | 64 symbols | | 64 symbols |

$64N_{PS}$ symbols

(b)

The 1$^{st}$ symbol of the training sequence is also used as the first symbol of the pilot sequence

☐ $N_{TS}$ training symbols as a training sequence

■ $N_{PS}$ pilot symbols as a pilot sequence

▨ Symbols before framing, including information and parity symbols

$N_{TS}$ | 64−$N_{TS}$ | 1 | 63 | ... | 1 | 63

| 64 symbols | 64 symbols | | 64 symbols |

$64N_{PS}$ symbols

(c)

FIG. 6

FIG. 7

FIG. 8

178752 symbols

| Sub-frame 1 | Sub-frame 2 | Sub-frame 3 | ... | Sub-frame 49 |

3648 symbols    3648 symbols    3648 symbols      3648 symbols

(a)

The 1st symbol of the training sequence is also used as the first symbol of the pilot sequence

☒ **6** training symbols as a training sequence

⊟ **24** frame alignment word symbols as a frame alignment word sequence

☐ **74** reserved symbols

■ **57** pilot symbols as a pilot sequence

☒ Symbols before framing, including information and parity symbols

| 6 | 24 | 34 | 1 | 40 | 23 | 1 | 63 | ... | 1 | 63 |

64 symbols    64 symbols    64 symbols      64 symbols

**3648 symbols**

(b)

The 1st symbol of the training sequence is also used as the first symbol of the pilot sequence

☒ **6** training symbols as a training sequence

■ **57** pilot symbols as a pilot sequence

☒ Symbols before framing, including information and parity symbols

| 6 | 58 | 1 | 63 | ... | 1 | 63 |

64 symbols    64 symbols      64 symbols

**3648 symbols**

(c)

FIG. 9

FIG. 10

FIG. 11

FIG. 12

FIG. 13

FIG. 14

178880 symbols

| Sub-frame 1 | Sub-frame 2 | Sub-frame 3 | ... | Sub-frame 43 |

4160 symbols    4160 symbols    4160 symbols              4160 symbols

(a)

The 1$^{st}$ symbol of the training sequence is also used as the first symbol of the pilot sequence

☐ **10** training symbols as a training sequence

☐ **22** frame alignment word symbols as a frame alignment word sequence

☐ **60** reserved symbols

■ **65** pilot symbols as a pilot sequence

☐ Symbols before framing, including information and parity symbols

| **10** | **22** | **32** | **1** | **28** | **35** | **1** | **63** | ... | **1** | **63** |

64 symbols    64 symbols    64 symbols              64 symbols

**4160 symbols**

(b)

The 1$^{st}$ symbol of the training sequence is also used as the first symbol of the pilot sequence

☐ **10** training symbols as a training sequence

■ **65** pilot symbols as a pilot sequence

☐ Symbols before framing, including information and parity symbols

| **10** | **54** | **1** | **63** | ... | **1** | **63** |

64 symbols    64 symbols              64 symbols

**4160 symbols**

(c)

FIG. 15

FIG. 16

FIG. 17

255

(a)                                    (b)                                    (c)

FIG. 18

FIG. 19

179200 symbols

| Sub-frame 1 | Sub-frame 2 | Sub-frame 3 | ... | Sub-frame 50 |

3584 symbols     3584 symbols     3584 symbols        3584 symbols

(a)

The 1ˢᵗ symbol of the training sequence is also used as the first symbol of the pilot sequence

☐ **15** training symbols as a training sequence

☐ **22** frame alignment word symbols as a frame alignment word sequence

☐ **62** reserved symbols

■ **56** pilot symbols as a pilot sequence

☐ Symbols before framing, including information and parity symbols

| 15 | 22 | 27 | 1 | 35 | 28 | 1 | 63 | ... | 1 | 63 |

64 symbols    64 symbols    64 symbols       64 symbols

**3584 symbols**

(b)

The 1ˢᵗ symbol of the training sequence is also used as the first symbol of the pilot sequence

☐ **15** training symbols as a training sequence

■ **56** pilot symbols as a pilot sequence

☐ Symbols before framing, including information and parity symbols

| 15 | 49 | 1 | 63 | ... | 1 | 63 |

64 symbols    64 symbols      64 symbols

**3584 symbols**

(c)

FIG. 20

FIG. 21

(a)　　　　　　　　　　　　(b)　　　　　　　　　　　　(c)

FIG. 22

EP 4 531 356 B1

FIG. 23

175104 symbols

| Sub-frame 1 | Sub-frame 2 | Sub-frame 3 | ... | Sub-frame 48 |
|---|---|---|---|---|

3648 symbols     3648 symbols     3648 symbols          3648 symbols

(a)

The 1ˢᵗ symbol of the training sequence is also used as the first symbol of the pilot sequence

▨ **6** training symbols as a training sequence

▤ **24** frame alignment word symbols as a frame alignment word sequence

▢ **72** reserved symbols

■ **57** pilot symbols as a pilot sequence

▨ Symbols before framing, including information and parity symbols

| 6 | 24 | 34 | 1 | 38 | 25 | 1 | 63 | ... | 1 | 63 |
|---|---|---|---|---|---|---|---|---|---|---|

64 symbols     64 symbols     64 symbols          64 symbols

3648 symbols

(b)

The 1ˢᵗ symbol of the training sequence is also used as the first symbol of the pilot sequence

▨ **6** training symbols as a training sequence

■ **57** pilot symbols as a pilot sequence

▨ Symbols before framing, including information and parity symbols

| 6 | 58 | 1 | 63 | ... | 1 | 63 |
|---|---|---|---|---|---|---|

64 symbols     64 symbols          64 symbols

3648 symbols

(c)

FIG. 24

FIG. 25

180000 symbols

| Sub-frame 1 | Sub-frame 2 | Sub-frame 3 | ... | Sub-frame 50 |

3600 symbols   3600 symbols   3600 symbols              3600 symbols

(a)

The 1st symbol of the training sequence is also used as the first symbol of the pilot sequence

□ **12** training symbols as a training sequence

▤ **22** frame alignment word symbols as a frame alignment word sequence

□ **62** reserved symbols

■ **75** pilot symbols as a pilot sequence

▨ Symbols before framing, including information and parity symbols

| 12 | 22 | 14 | 1 | 47 | 1 1 | 46 | ... | 1 | 47 |

48 symbols     48 symbols     48 symbols              48 symbols

3600 symbols

(b)

The 1st symbol of the training sequence is also used as the first symbol of the pilot sequence

▨ **12** training symbols as a training sequence

■ **75** pilot symbols as a pilot sequence

▨ Symbols before framing, including information and parity symbols

| 12 | 36 | 1 | 47 | ... | 1 | 47 |

48 symbols     48 symbols              48 symbols

3600 symbols

(c)

FIG. 26

FIG. 27

(a)       (b)       (c)

FIG. 28

FIG. 29

176400 symbols

| Sub-frame 1 | Sub-frame 2 | Sub-frame 3 | ... | Sub-frame 49 |
|---|---|---|---|---|

3600 symbols     3600 symbols    3600 symbols       3600 symbols

(a)

The 1st symbol of the training sequence is also used as the first symbol of the pilot sequence

☐ **12** training symbols as a training sequence

☐ **22** frame alignment word symbols as a frame alignment word sequence

☐ **132** reserved symbols

■ **75** pilot symbols as a pilot sequence

☐ Symbols before framing, including information and parity symbols

| 12 | 22 | 14 | 1 | 47 | 1 | 47 | 1 | 24 | 23 | ... | 1 | 47 |

48 symbols   48 symbols   48 symbols   48 symbols      48 symbols

3600 symbols

(b)

The 1st symbol of the training sequence is also used as the first symbol of the pilot sequence

☐ **12** training symbols as a training sequence

■ **75** pilot symbols as a pilot sequence

☐ Symbols before framing, including information and parity symbols

| 12 | 36 | 1 | 47 | ... | 1 | 47 |

48 symbols    48 symbols      48 symbols

3600 symbols

(c)

FIG. 30

FIG. 31

```
┌──────────────────┐                              ┌──────────────────┐
│   Transmitting   │                              │ Receiving device │
│     device       │                              │                  │
└────────┬─────────┘                              └─────────┬────────┘
┌────────┴─────────────────┐                                │
│ 3201: Generate a super-frame│                             │
│ including a plurality of sub-frames│                      │
└────────┬─────────────────┘                                │
         │         3202: Super-frame                        │
         ├────────────────────────────────────────────────>│
         │                                        ┌─────────┴─────────────────┐
         │                                        │ 3203: Decode the received super-frame│
         │                                        └─────────┬─────────────────┘
         │                                                  │
```

FIG. 32

175104 symbols

| Sub-frame 1 | Sub-frame 2 | Sub-frame 3 | ... | Sub-frame 24 |

7296 symbols    7296 symbols    7296 symbols            7296 symbols

(a)

The 1$^{st}$ symbol of the training sequence is also used as the first symbol of the pilot sequence

☐ 11 training symbols as a training sequence

☐ $N_{FAW}$ frame alignment word symbols as a frame alignment word sequence

☐ $N_{RES}$ reserved symbols

■ 114 pilot symbols as a pilot sequence

☒ Symbols before framing, including information and parity symbols

| 11 | $N_{FAW}$ | ... | 1 | ... | 20 | 1 | 63 | ... | 1 | 63 |

64 symbols    64 symbols    64 symbols            64 symbols

**7296 symbols**

(b)

The 1$^{st}$ symbol of the training sequence is also used as the first symbol of the pilot sequence

☐ 11 training symbols as a training sequence

■ 114 pilot symbols as a pilot sequence

☒ Symbols before framing, including information and parity symbols

| 11 | 53 | 1 | 63 | ... | 1 | 63 |

64 symbols    64 symbols            64 symbols

**7296 symbols**

(c)

FIG. 33

FIG. 34

FIG. 35

FIG. 36

FIG. 37

FIG. 38

175104 symbols

| Sub-frame 1 | Sub-frame 2 | Sub-frame 3 | ... | Sub-frame 48 |

3648 symbols    3648 symbols    3648 symbols              3648 symbols

(a)

The 1$^{st}$ symbol of the training sequence is also used as the first symbol of the pilot sequence

**6** training symbols as a training sequence

$N_{FAW}$ frame alignment word symbols as a frame alignment word sequence

$N_{RES}$ reserved symbols

**57** pilot symbols as a pilot sequence

Symbols before framing, including information and parity symbols

| 6 | $N_{FAW}$ | ... | 1 | ... | 3 | 1 | 63 | ... | 1 | 63 |

64 symbols    64 symbols    64 symbols              64 symbols

**3648 symbols**

(b)

The 1$^{st}$ symbol of the training sequence is also used as the first symbol of the pilot sequence

**6** training symbols as a training sequence

**57** pilot symbols as a pilot sequence

Symbols before framing, including information and parity symbols

| 6 | 58 | 1 | 63 | ... | 1 | 63 |

64 symbols    64 symbols              64 symbols

**3648 symbols**

(c)

FIG. 39

Output X
polarization

Output Y
polarization

X polarization
seed is 0x0B1
Y polarization
seed is 0x3E9

Output

$\left.\begin{matrix}1\\0\end{matrix}\right\}$ A–Aj    $\left.\begin{matrix}1\\0\end{matrix}\right\}$ A–Aj

$\left.\begin{matrix}0\\0\end{matrix}\right\}$ –A–Aj    $\left.\begin{matrix}0\\1\end{matrix}\right\}$ –A+Aj

$\left.\begin{matrix}1\\1\end{matrix}\right\}$ A+Aj    $\left.\begin{matrix}0\\1\end{matrix}\right\}$ –A+Aj

$\left.\begin{matrix}0\\1\end{matrix}\right\}$ –A+Aj    $\left.\begin{matrix}1\\0\end{matrix}\right\}$ A+Aj

$\left.\begin{matrix}0\\0\end{matrix}\right\}$ –A–Aj    $\left.\begin{matrix}1\\1\end{matrix}\right\}$ A+Aj

$\left.\begin{matrix}0\\1\end{matrix}\right\}$ –A+Aj    $\left.\begin{matrix}1\\1\end{matrix}\right\}$ A+Aj

⋮      ⋮

0
1   0
1   1
1   0
1   1
1   1
0   0
1   0
0   0
0   1
1

FIG. 40

FIG. 41

| Transmitting device |

3301: Generate a super-frame including a plurality of sub-frames

3302: Super-frame

| Receiving device |

3303: Decode the received super-frame

FIG. 42

Output X polarization

Output Y polarization

X polarization seed is 0x002
Y polarization seed is 0x3C6

Output

FIG. 43

FIG. 44

**EP 4 531 356 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019305854 A1

**Non-patent literature cited in the description**

- Hybrid PN-ZP-DMT Scheme for Spectrum-Efficient Optical Communication and Its Application to SI-POF. **PENG LINNING et al.** JOURNAL OF LIGHTWAVE TECHNOLOGY. IEEE, 15 September 2014, vol. 32